(19) Europäisches Patentamt / European Patent Office / Office européen des brevets

(11) **EP 4 436 142 B1**

(12) **EUROPEAN PATENT SPECIFICATION**

(45) Date of publication and mention
of the grant of the patent:
**08.07.2026 Bulletin 2026/28**

(21) Application number: **24193000.7**

(22) Date of filing: **06.05.2020**

(51) International Patent Classification (IPC):
***H04L 67/12*** *(2022.01)*

(52) Cooperative Patent Classification (CPC):
**G06F 11/3006; G05B 19/4183; G06F 11/3409;
G06F 11/3438; G06N 3/0464; G06N 3/09;
G06N 20/00; G06Q 10/06; G06Q 10/20;
G06Q 30/0201; G06Q 30/0241; G06Q 50/02;
G06Q 50/04; G06Q 50/06; H04L 67/025;** (Cont.)

(54) **PLATFORM FOR FACILITATING DEVELOPMENT OF INTELLIGENCE IN AN INDUSTRIAL INTERNET OF THINGS SYSTEM**

PLATTFORM ZUR ENTWICKLUNG VON INTELLIGENZ IN EINEM INDUSTRIELLEN INTERNET-DER-DINGE-SYSTEM

PLATEFORME POUR FACILITER LE DÉVELOPPEMENT DE L'INTELLIGENCE DANS UN SYSTÈME DE L'INTERNET DES OBJETS INDUSTRIEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: 06.05.2019  US 201962843798 P
02.12.2019  US 201916700413
13.01.2020  US 202016741470
03.02.2020  US 202062969629 P

(43) Date of publication of application:
**25.09.2024 Bulletin 2024/39**

(62) Document number(s) of the earlier application(s) in
accordance with Art. 76 EPC:
**20802722.7 / 3 966 695**

(73) Proprietor: **Strong Force IoT Portfolio 2016, LLC
Fort Lauderdale, FL 33301 (US)**

(72) Inventors:
• **CELLA, Charles, H.
Pembroke, 02358 (US)**
• **EL-TAHRY, Teymour
Detroit, 48226 (US)**

(74) Representative: **Kransell & Wennborg KB
P.O. Box 2096
403 12 Göteborg (SE)**

(56) References cited:
**US-A1- 2010 315 207    US-A1- 2018 188 704**

(52) Cooperative Patent Classification (CPC): (Cont.)
**H04L 67/12; H04L 69/28;** G05B 2219/31282;
G06N 3/006; G06N 3/044; G06N 3/084;
G06N 5/022; G06N 5/025; G06Q 2220/00;
Y02P 90/02

**Description**

BACKGROUND

Field

The present disclosure relates to methods and systems for data collection in industrial environments, as well as methods and systems for leveraging collected data for monitoring, remote control, autonomous action, and other activities in industrial environments.

Description of the Related Art

Industrial environments, such as environments for large scale manufacturing (such as manufacturing of aircraft, ships, trucks, automobiles, and large industrial machines), energy production environments (such as oil and gas plants, renewable energy environments, and others), energy extraction environments (such as mining, drilling, and the like), construction environments (such as for construction of large buildings), and others, involve highly complex machines, devices and systems and highly complex workflows, in which operators must account for a host of parameters, metrics, and the like in order to optimize design, development, deployment, and operation of different technologies in order to improve overall results. Historically, data has been collected in industrial environments by human beings using dedicated data collectors, often recording batches of specific sensor data on media, such as tape or a hard drive, for later analysis. Batches of data have historically been returned to a central office for analysis, such as undertaking signal processing or other analysis on the data collected by various sensors, after which analysis can be used as a basis for diagnosing problems in an environment and/or suggesting ways to improve operations. This work has historically taken place on a time scale of weeks or months, and has been directed to limited data sets.

The emergence of the Internet of Things (IoT) has made it possible to connect continuously to, and among, a much wider range of devices. Most such devices are consumer devices, such as lights, thermostats, and the like. More complex industrial environments remain more difficult, as the range of available data is often limited, and the complexity of dealing with data from multiple sensors makes it much more difficult to produce "smart" solutions that are effective for the industrial sector. A need exists for improved methods and systems for data collection in industrial environments, as well as for improved methods and systems for using collected data to provide improved monitoring, control, intelligent diagnosis of problems and intelligent optimization of operations in various heavy industrial environments.

Industrial systems in various environments have a number of challenges to utilizing data from a multiplicity of sensors. Many industrial systems have a wide range of computing resources and network capabilities at a location at a given time, for example as parts of the system are upgraded or replaced on varying time scales, as mobile equipment enters or leaves a location, and due to the capital costs and risks of upgrading equipment. Additionally, many industrial systems are positioned in challenging environments, where network connectivity can be variable, where a number of noise sources such as vibrational noise and electro-magnetic (EM) noise sources can be significant an in varied locations, and with portions of the system having high pressure, high noise, high temperature, and corrosive materials. Many industrial processes are subject to high variability in process operating parameters and non-linear responses to off-nominal operations. Accordingly, sensing requirements for industrial processes can vary with time, operating stages of a process, age and degradation of equipment, and operating conditions. Previously known industrial processes suffer from sensing configurations that are conservative, detecting many parameters that are not needed during most operations of the industrial system, or that accept risk in the process, and do not detect parameters that are only occasionally utilized in characterizing the system. Further, previously known industrial systems are not flexible to configuring sensed parameters rapidly and in real-time, and in managing system variance such as intermittent network availability. Industrial systems often use similar components across systems such as pumps, mixers, tanks, and fans. However, previously known industrial systems do not have a mechanism to leverage data from similar components that may be used in a different type of process, and/or that may be unavailable due to competitive concerns. Additionally, previously known industrial systems do not integrate data from offset systems into the sensor plan and execution in real time.

Industrial environments are widely populated with large, complex, heavy machines that are designed to have very long working lifetimes and have ongoing service requirements, including requirements for scheduled maintenance and for often unanticipated repairs.

Many of the large industrial machines that require ongoing maintenance, service and repairs are involved in high stakes production processes and other processes, such as energy production, manufacturing, mining, drilling, and transportation, that preferably involve minimal or no interruption. An unanticipated problem, or an extended delay in a service operation that requires a shutdown of a machine that is critical to such a process can cost thousands, or even millions of dollars per day. Embodiments disclosed herein, as well as in the documents incorporated by reference herein, provide for, among many other things, a platform having improved devices, systems, components, processes and methods for collection, processing, and use of data from and about industrial machines, including for purposes of predicting faults, anticipating needs for maintenance, and facilitating repairs. However, in some areas, the workforce that maintains, services and repairs heavy industrial machines is aging. As workers retire, much of their expertise is lost, and new workers often lack even basic factual information about a machine (such as about the internal structure of the machine), operational information (such as about how it is intended to behave in various working modes) and/or procedural information (such as how to perform a routine maintenance task), much less the know-how and expertise to handle a more complex procedure, such as a repair, that may require multi-step procedures that use unfamiliar parts or tools. Another challenge is finding relevant parts and components for an industrial machine, such as ones that may be required for an emergency repair, in a timely manner, so that they are available at the place and time required for the work. Information about the internal structure, parts or components of a machine may be absent, so that a worker may be required to guess about what is wrong, what part is involved, and how a repair needs to be conducted. A repair may require multiple visits, such as one or more to discover the nature of a problem, what parts need to be replaced, and what tools are required, and one or more others to conduct the repair once the relevant parts and tools arrive. This can mean days of delay at massive cost to the operator of the machinery. This process may repeat a few months or years later, as the next worker may have no way of accessing the knowledge acquired about the internal structure, parts or components of the machine that was acquired by an initial worker.

A need exists for improved methods and systems for collecting, discovering, capturing, disseminating, managing, and processing information about industrial machines, including factual information (such as about internal structures, parts and components), operational information and procedural information, including know-how and other information relevant to maintenance, service and repairs. A need also exists for improved methods and systems for finding a set of workers having relevant know-how and expertise about maintenance, service and repair of a particular machine. A need also exists for improved methods and systems for finding, ordering, and fulfilling orders for relevant parts and components, so that maintenance, service and repair operations can occur seamlessly, with minimal disruption.

Document US 2018/284755 A1 discloses a system for data collection in an industrial environment.

## SUMMARY

The present disclosure is directed to a platform for facilitating development of intelligence in an Industrial Internet of Things (IIoT) system. The platform can comprise a plurality of distinct data-handling layers. The plurality of distinct data-handling layers can comprise an industrial monitoring systems layer that collects data from or about a plurality of industrial entities in the IIoT system; an industrial entity-oriented data storage systems layer that stores the data collected by the industrial monitoring systems layer; an adaptive intelligent systems layer that facilitates the coordinated development and deployment of intelligent systems in the IIoT system; and an industrial management application platform layer that includes a plurality of applications and that manages the platform in a common application environment. The adaptive intelligent systems layer can include a robotic process automation system that develops and deploys automation capabilities for one or more of the plurality of industrial entities in the IIoT system.

In some aspects, the robotic process automation system receives data from the industrial monitoring systems layer and the industrial entity-oriented data storage systems layer.

In some aspects, the robotic process automation system automates at least one of a set of software functions and a set of physical tasks based on a training set of observations of expert human actions.

In some aspects, the robotic process automation system tracks and records a set of states, actions, events, and results that occur by, within, from, or about systems and processes with which a human is engaging in the IIoT system.

In some aspects, the robotic process automation system records mouse clicks on a frame of video that appears within a process by which a human reviews the video.

In some aspects, the human highlights points of interest within the video, tags objects in the video, captures parameters in the video, or operates on the video within a graphical user interface.

In some aspects, the robotic process automation system tracks and records sets of interactions of a human as the human interact with a set of interfaces associated with a computing device within the IIoT system.

In some aspects, the robotic process automation system tracks and records a set of states, actions, events, and results that occur by, within, from, or about systems and processes with which the human is engaging in the IIoT system.

In some aspects, the robotic process automation system utilizes an artificial intelligence system to develop and deploy automation capabilities for one or more of the plurality of industrial entities in the IIoT system.

In some aspects, the artificial intelligence system comprises at least one of an expert system, a machine learning system, a deep learning system, and a neural network.

In some aspects, the artificial intelligence system is trained with a training set of observations of human interactions and system states, events, and outcomes in the IIoT system.

In some aspects, the robotic process automation system obtains the training set.

In some aspects, the robotic process automation system records system states, events, and outcomes in training set.

In some aspects, the robotic process automation system tracks and records the observations of human interactions as the human interacts with a set of interfaces associated with a computing device within the IIoT system.

In some aspects, the system or process states and events include elements that were a subject of human interaction, what a state of a system was or is before, during and after the human interaction, and what outputs were provided by the system or what results were achieved.

In some aspects, the robotic process automation system further includes a human correction system that receives inputs from a human during an initial automation capability deployment, wherein the human inputs are utilized to improve performance of the automation capability.

In some aspects, the robotic process automation system is seeded during a learning phase with a set of expert human interactions in order to develop and deploy the automation capabilities to replicate the expert human interactions.

In some aspects, the robotic process automation system enters a deep learning phase subsequent to the learning phase in order to improve performance of the automation capabilities when compared to the expert human interactions.

In some aspects, the robotic process automation system in the deep learning phase utilizes feedback of one or more outcomes to improve performance of the automation capabilities.

In some aspects, the robotic process automation system includes a computer vision system to analyze images of a display of a computer while a user is manually interacting with the computer while performing a specific process to teach a robot how to perform the process.

The present disclosure is further directed to a platform for facilitating development of intelligence in an Industrial Internet of Things (IIoT) system that comprises a plurality of distinct data-handling layers. The plurality of distinct data-handling layers can comprise an industrial monitoring systems layer that collects data from or about a plurality of industrial entities in the IIoT system; an industrial entity-oriented data storage systems layer that stores the data collected by the industrial monitoring systems layer; an adaptive intelligent systems layer that provisions available computing resources within the platform; and an industrial management application platform layer that manages the platform in a common application environment.

In some aspects, platform can further comprise a set of interfaces that exchange data between the plurality of distinct data-handling layers.

In some aspects, the set of interfaces comprises at least one of an application programming interface (API), a broker, a service, a connector, a wired or wireless communication link, a port, a human-accessible interface, and a software interface.

In some aspects, each of the plurality of distinct data-handling layers has a microservices architecture.

In some aspects, each of the plurality of distinct data-handling layers has a microservices architecture.

In some aspects, outputs, events, and outcomes are exchanged between the plurality of distinct data-handling layers.

In some aspects, the industrial entity-oriented data storage systems layer stores produced data that is generated by other layers of the plurality of distinct data-handling layers.

In some aspects, the industrial entity-oriented data storage systems layer is a common data source for other layers of the plurality of distinct data-handling layers.

In some aspects, the industrial entity-oriented data storage systems layer is a common data source for other layers of the plurality of distinct data-handling layers.

In some aspects, the data stored in the industrial entity-oriented data storage systems layer comprises one or more of asset and facility data, worker data, event data, claims data, production data, and supply chain data.

In some aspects, the asset and facility data comprises one or more of asset identity data, operational data, transactional data, event data, state data, workflow data, and maintenance data.

In some aspects, the worker data comprises one or more of identity data, role data, task data, workflow data, health data, performance data, and quality data.

In some aspects, the event data comprises one or more of process events, financial events, output events, input events, state-change events, operating events, repair events, maintenance events, service events, damage events, injury events, replacement events, refueling events, recharging events, and supply events.

In some aspects, the claims data comprises one or more of insurance claims data, product liability claims data, general liability claims data, workers compensation claims data, injury claims data, and contract claims data.

In some aspects, the production data comprises one or more of data relating to energy production found in databases of public utilities or independent services organizations that maintain energy infrastructure, data relating to outputs of manufacturing, data related to outputs of mining and energy extraction facilities, and outputs of drilling and pipeline facilities.

In some aspects, the supply chain data comprises one or more of data relating to items supplied, amounts, pricing, delivery, sources, routes, and customs information.

In some aspects, the available computing resources within the platform provisioned by the adaptive intelligent systems layer include one or more of available processing cores, available servers, available edge computing resources, available on-device resources, available cloud infrastructure, data storage resources, networking resources, and energy resources.

In some aspects, the data storage resources include one or more of local storage on devices, storage resources in or on industrial entities or environments, storage on asset tags, local area network storage, network storage resources, cloud-based storage resources, and database resources.

In some aspects, the networking resources include one or more of cellular network spectrum, wireless network resources, and fixed network resources.

In some aspects, the energy resources include one or more of available battery power, available renewable energy, fuel, and grid-based power.

In some aspects, the adaptive intelligent systems layer provisions the available computing resources within the platform based on one or more of application requirements, quality of service, budgets, costs, pricing, risk factors, operational objectives, optimization parameters, returns on investment, profitability, and uptime/-downtime.

In some aspects, the adaptive intelligent systems layer provisions the available computing resources within the platform such that low latency resources are used for remote control and longer latency resources are used for systems analytics applications.

In some aspects, the industrial management application platform layer that manages the platform in the common application environment comprises one or more applications that output at least one of: state and status information for various objects, entities, processes, or flows; object information including one or more of identity, attribute and parameter information for various classes of objects of various data types; event and change information for workflows, dynamic systems, processes, procedures, protocols, or algorithms; and outcome information including indications of success and failure, indications of process or milestone completion, indications of correct or incorrect predictions, indications of correct or incorrect labeling or classification, or success metrics.

In some aspects, the success metrics include information relating to yield, engagement, return on investment, profitability, efficiency, timeliness, quality of service, quality of product, or customer satisfaction

The present disclosure is further directed to a platform for facilitating development of intelligence in an Industrial Internet of Things (IIoT) system that comprises a plurality of distinct data-handling layers. The plurality of distinct data-handling layers can comprise an industrial monitoring systems layer that collects data from or about a plurality of industrial entities in the IIoT system; an industrial entity-oriented data storage systems layer that stores the data collected by the industrial monitoring systems layer; an adaptive intelligent systems layer that provisions available computing resources within the platform; and an industrial management application platform layer that manages the platform in a common application environment, wherein the industrial management application platform layer comprises one or more applications that manage, monitor, control, analyze, or otherwise interact with the plurality of industrial entities in the IIoT system.

In some aspects, the one or more applications comprise an industrial asset lifecycle management application that manages at least one industrial asset of the plurality of industrial entities by storage of attribute data, state data, and transaction data for the at least one industrial asset.

In some aspects, the industrial asset lifecycle management application comprises a blockchain-based industrial asset lifecycle management application.

In some aspects, the one or more applications comprise a process control optimization application that automatically controls at least one of an action, an operating parameter, and a state of an industrial process based on at least one of a detected condition and a detected state of a system used in the industrial process.

In some aspects, the one or more applications comprise a building automation and controls application that automates control of at least one environmental parameter within an industrial environment of the IIoT system.

In some aspects, the one or more applications comprise an enterprise asset management application that manages at least one of an action, a workflow, a task, and a state related to an asset that is controlled by an enterprise.

In some aspects, the one or more applications comprise a cloud/Platform as a Service ("PaaS")/Software as a Service ("SaaS") solution.

In some aspects, the one or more applications comprise a factory operations visibility and intelligence ("FOVI") application that provides state information relating to a set of factory operation workflows and a set of factory systems.

In some aspects, the one or more applications comprise an autonomous manufacturing application that controls at least one of an operating parameter, a work flow, and a state of a manufacturing system based on the data collected by the industrial monitoring systems layer.

In some aspects, the one or more applications comprise a smart supply chain application that automatically determines and initiates at least one action that determines at least one of a delivery time, an item, a quantity, and a delivery location of a set of industrial components based on at least one of a state and a condition detected in an industrial environment.

In some aspects, the one or more applications comprise an inventory quality control application that provides a set of measures of inventory quality based on detection of at least one of a state and a condition of an item of inventory in an industrial environment.

In some aspects, the one or more applications comprise an industrial analytics application that provides a set of analytic results related to at least one of maintenance, repair, servicing, operation, and optimization of an industrial system in the IIoT system.

In some aspects, the one or more applications comprise an industrial digital thread application wherein a common digital data structure is provided for use by a set of design, manufacturing, supply, and maintenance systems relating to the plurality of industrial entities in the IIoT system.

In some aspects, the one or more applications comprise a robotic process automation application for automating at least one of a set of software functions and a set of physical tasks based on a training set of observations of expert human actions.

In some aspects, the one or more applications comprise a visual quality detection application that uses computer vision to detect a set of conditions related to at least one of a state, a status, and a condition of at least one of the plurality of industrial entities.

In some aspects, the one or more applications comprise a collaborative robotic application, wherein a set of tasks performed by humans are augmented by collaboration with a set of at least one of a hardware robot and a software robot.

In some aspects, the one or more applications comprise a real time monitoring application for automatically detecting, monitoring, and reporting on a transaction status of a set of shipments of industrial assets by processing of a distributed ledger containing transaction data for the industrial assets.

In some aspects, the one or more applications comprise a machine condition monitoring application that monitors a condition of an industrial machine based on processing of at least one of operating state data, machine data, telematics data, on-board diagnostic system data, environmental data, and operator data for the industrial machine.

In some aspects, the one or more applications comprise a continuous emission monitoring application that monitors and reports emissions from a set of industrial machines in an industrial environment.

In some aspects, the one or more applications comprise an indoor air quality monitoring application for monitoring a set of air quality parameters within an industrial environment.

In some aspects, the one or more applications comprise an indoor sound quality monitoring application for measuring a set of sound parameters experienced by workers in an industrial environment.

The present disclosure is further directed to a platform for facilitating development of intelligence in an Industrial Internet of Things (IIoT) system that comprises a plurality of distinct data-handling layers. The plurality of distinct data-handling layers can comprise an industrial monitoring systems layer that collects data from or about a plurality of industrial entities in the IIoT system; an industrial entity-oriented data storage systems layer that stores the data collected by the industrial monitoring systems layer; an adaptive intelligent systems layer that facilitates the coordinated development and deployment of intelligent systems in the IIoT system; and an industrial management application platform layer that manages the platform in a common application environment, wherein the adaptive intelligent systems layer includes data processing, artificial intelligence, and computational systems that develop, improve, or adapt processes in the IIoT system based on the data collected by the industrial monitoring systems layer.

In some aspects, the adaptive intelligent systems layer includes an adaptive edge compute management system that adaptively manages edge computation, storage, and processing in the IIoT system.

In some aspects, the adaptive intelligent systems layer includes a robotic process automation system that develops and deploys automation capabilities for at least one of the plurality of industrial entities in the IIoT system.

In some aspects, the adaptive intelligent systems layer includes a set of protocol adaptors that facilitate adaptive protocol transformations of data within the IIoT system.

In some aspects, the adaptive protocol transformations of data within the IIoT system comprises transforming data in-flight.

In some aspects, the adaptive protocol transformations of data within the IIoT system comprises transforming data for storage.

In some aspects, the adaptive protocol transformations of data within the IIoT system comprises transforming data for processing by an element of the IIoT system.

In some aspects, the adaptive intelligent systems layer includes a packet acceleration system that facilitates increasing a speed of transmission of the data in the IIoT system.

In some aspects, the adaptive intelligent systems layer includes an edge intelligence system that adapts edge computation resources.

In some aspects, the edge intelligence system adapts the edge computation resources based on Quality of Service, latency requirements, congestion, and cost of edge computation capabilities across more than one application in the industrial management application platform layer.

In some aspects, the adaptive intelligent systems layer includes an adaptive networking system that adapts network communication in the IIoT system.

In some aspects, the adaptive networking system adapts network communication in the IIoT system based on Quality of Service, latency requirements, and congestion in the network.

In some aspects, the adaptive intelligent systems layer includes a set of state and event managers that adapt the processes in the IIoT system based on state and event data.

In some aspects, the adaptive intelligent systems layer includes a set of opportunity miners that identify opportunities for increased automation or intelligence in the IIoT system.

In some aspects, the set of opportunity miners prioritize the opportunities for increased automation or intelligence in the IIoT system.

In some aspects, the adaptive intelligent systems layer includes a set of artificial intelligence systems that develop, improve, or adapt processes in the IIoT system.

In some aspects, the set of artificial intelligence systems includes one or more of an expert system, a neural network, a deep neural network, a supervised learning system, a machine learning system, and a deep learning system.

The present disclosure is also directed to a system for data processing in an industrial environment. The system can include one or more Industrial Internet of Things (IIoT) devices in the industrial environment. The one or more IIoT devices can obtain, generate, or store data relating to the industrial environment. The system can further include one or more IIoT platforms deployed in a cloud computing environment and configured to collect, process, and analyze the data relating to the industrial environment. Additionally, the system can include one or more interfaces through which the one or more IIoT devices connect to the one or more IIoT platforms and a self-organizing protocol adaptor that facilitates adaptive in-flight data protocol transformation of the data between the one or more IIoT devices and the one or more IIoT platforms via the one or more interfaces.

In some aspects, the self-organizing protocol adaptor facilitates adaptive in-flight data protocol transformation of the data by selecting at least one interface of the one or more interfaces.

In some aspects, the self-organizing protocol adaptor facilitates adaptive in-flight data protocol transformation of the data by selecting an appropriate protocol for the data to be utilized by the one or more IIoT platforms.

In some aspects, the self-organizing protocol adaptor transforms the data to comply with the selected appropriate protocol.

In some aspects, the self-organizing protocol adaptor selects the appropriate protocol for the data by artificial intelligence.

In some aspects, the artificial intelligence comprises at least one of an expert system, a machine learning system, a deep learning system, and a neural network.

In some aspects, the self-organizing protocol adaptor facilitates adaptive in-flight data protocol transformation of the data by repackaging the data.

In some aspects, the self-organizing protocol adaptor facilitates adaptive in-flight data protocol transformation of the data by wrapping the data.

In some aspects, wrapping the data is performed using input from an artificial intelligence system.

In some aspects, the artificial intelligence system comprises at least one of an expert system, a machine learning system, a deep learning system, and a neural network.

In some aspects, the self-organizing protocol adaptor facilitates adaptive in-flight data protocol transformation of the data by establishing a connection to at least one of the one or more IIoT platforms.

In some aspects, the self-organizing protocol adaptor prepares a data stream containing the data.

In some aspects, the data stream is prepared by formatting the data.

In some aspects, the data is formatted using input from an artificial intelligence system.

In some aspects, the artificial intelligence system comprises at least one of an expert system, a machine learning system, a deep learning system, and a neural network.

In some aspects, the data stream is prepared by wrapping the data.

In some aspects, the data is wrapped using input from an artificial intelligence system.

In some aspects, the artificial intelligence system comprises at least one of an expert system, a machine learning system, a deep learning system, and a neural network.

In some aspects, the data stream is prepared by translating the data.

In some aspects, the data is translated using input from an artificial intelligence system.

In some aspects, the artificial intelligence system comprises at least one of an expert system, a machine learning system, a deep learning system, and a neural network.

The present disclosure is additionally directed to a platform for facilitating development of intelligence in an Industrial Internet of Things (IIoT) system. The platform can comprise a plurality of distinct data-handling layers comprising: an industrial monitoring systems layer that collects data from or about a plurality of industrial entities in the IIoT system; an industrial entity-oriented data storage systems layer that stores the data collected by the industrial monitoring systems layer; and an adaptive intelligent systems layer that receives the data, the adaptive intelligent systems layer including an opportunity mining system that utilizes the data to identify opportunities for increased automation within the platform.

In some aspects, the plurality of distinct data-handling layers further comprise an industrial management application platform layer that includes one or more applications for performing a task in the IIoT system, monitoring performance of the task, or assisting with the performance of the task.

In some aspects, the opportunity mining system utilizes the data to identify opportunities for increased automation within the one or more applications.

In some aspects, the opportunity mining system includes a worker observation system that observes workers in the IIoT system to obtain observation data, the worker observation system including one or more sensors, wherein the opportunity mining system further utilizes the observation data to identify opportunities for increased automation within the platform.

In some aspects, the one or more sensors includes at least one of a camera, a wearable sensor, a movement sensor, an infrared sensor, and an audio sensor.

In some aspects, the worker observation system differentiates between types of workers to obtain the observation data.

In some aspects, the worker observation system differentiates between locations of workers to obtain the observation data.

In some aspects, the worker observation system observes a time related to the workers to obtain the observation data.

In some aspects, the time relates to duration of an activity performed by the workers.

In some aspects, the opportunity mining system includes a task specialization determination system that determines a level of domain-specific or entity-specific knowledge or expertise required to undertake an action, use a program, use a machine, or perform an activity within the IIoT system.

In some aspects, the task specialization determination system determines an identity, credentials, and experience of workers that undertake the action, use the program, use the machine, or perform the activity within the IIoT system, wherein the identity, credentials, and experience are utilized to determine the level of domain-specific or entity-specific knowledge or expertise.

In some aspects, the opportunity mining system identifies the opportunities for increased automation within the platform based on the level of domain-specific or entity-specific knowledge or expertise.

In some aspects, the opportunity mining system prioritizes the opportunities for increased automation within the platform.

In some aspects, the opportunity mining system includes a worker observation system that observes workers in the IIoT system to obtain observation data, the worker observation system including one or more sensors, wherein the opportunity mining system further utilizes the observation data to identify and prioritize the opportunities for increased automation within the platform.

In some aspects, the one or more sensors includes at least one of a camera, a wearable sensor, a movement sensor, an infrared sensor, and an audio sensor.

In some aspects, the worker observation system differentiates between types of workers to obtain the observation data.

In some aspects, the worker observation system differentiates between locations of workers to obtain the observation data.

In some aspects, the worker observation system observes a time related to the workers to obtain the observation data.

In some aspects, the time relates to duration of an activity performed by the workers.

In some aspects, the opportunity mining system identifies and prioritizes the opportunities for increased automation within the platform based on the level of domain-specific or entity-specific knowledge or expertise.

In additional or alternative implementations, the present disclosure is directed to a platform for facilitating development of intelligence in an Industrial Internet of Things (IIoT) system that comprises a plurality of distinct data-handling layers. The plurality of distinct data-handling layers can comprise: an industrial monitoring systems layer that collects data from or about a plurality of industrial entities in an industrial environment; an industrial entity-oriented data storage systems layer that stores the data collected by the industrial monitoring systems layer; and an adaptive intelligent systems layer that facilitates the coordinated development and deployment of intelligent systems in the IIoT system. The adaptive intelligent systems layer can include an adaptive edge compute management system that adaptively manages edge computation, storage, and processing in the IIoT system.

In some aspects, the adaptive edge compute management system varies a storage location for the data between on-device storage, local systems, network storage resources, and cloud-based storage resources.

In some aspects, the adaptive edge compute management system varies a processing location for the data between a local area network of the industrial environment, one or more peer-to-peer networks of devices in the industrial environment, computing resources of at least one of the plurality of industrial entities, and cloud-based processing resources.

In some aspects, the adaptive edge compute management system adaptively manages edge computation, storage, and processing in the IIoT system based on a set of artificial intelligence systems.

In some aspects, the set of artificial intelligence systems includes one or more of an expert system, a neural network, a deep neural network, a supervised learning system, a machine learning system, and a deep learning system.

In some aspects, the adaptive edge compute management system adaptively manages edge computation, storage, and processing in the IIoT system based on detected conditions of a communication network for the industrial environment.

In some aspects, the adaptive edge compute management system adaptively manages edge computation, storage, and processing in the IIoT system based on Quality of Service of the communication network.

In some aspects, the adaptive edge compute management system adaptively manages edge computation, storage, and processing in the IIoT system based on latency of the communication network.

In some aspects, the adaptive edge compute management system adaptively manages edge computation, storage, and processing in the IIoT system based on congestion of the communication network.

In some aspects, the adaptive edge compute management system adaptively manages edge computation, storage, and processing in the IIoT system based on cost of computational or storage resources utilized.

In some aspects, the adaptive edge compute management system adaptively manages edge computation, storage, and processing in the IIoT system based on Quality of Service, latency requirements, congestion, and cost of edge computation capabilities in the IIoT system.

In some aspects, the adaptive edge compute management system adaptively manages edge computation, storage, and processing in the IIoT system further based on priority of computation, storage, and processing tasks.

In some aspects, the adaptive edge compute management system adaptively manages edge computation, storage, and processing in the IIoT system further based on value of computation, storage, and processing tasks.

In some aspects, the value of computation, storage, and processing tasks includes one or more of return on investment, yield, and cost information.

In some aspects, the cost information includes cost of failure information.

In some aspects, the adaptive edge compute management system varies a storage location for the data between on-device storage, local systems, network storage resources, and cloud-based storage resources; and when data connections are slow or unreliable, the adaptive edge compute management system varies the storage location between on-device storage, local systems, and network storage resources.

In some aspects, the adaptive edge compute management system varies a storage location for the data between on-device storage, local systems, network storage resources, and cloud-based storage resources; and when data connections are strong, the adaptive edge compute management system varies the storage location between network storage resources and cloud-based storage resources.

In some aspects, when data connections are slow or unreliable, the adaptive edge compute management system varies the storage location between on-device storage, local systems, and network storage resources.

In some aspects, the adaptive edge compute management system adaptively managing edge computation, storage, and processing in the IIoT system comprises selecting a communication protocol for data transmission.

In some aspects, the adaptive edge compute management system adaptively managing edge computation, storage, and processing in the IIoT system comprises dynamically defining what constitutes an edge for each device in the IIoT system.

The present disclosure is directed to a platform for facilitating development of intelligence in an Industrial Internet of Things (IIoT) system that comprises a plurality of distinct data-handling layers. The plurality of distinct data-handling layers can comprise an industrial monitoring systems layer that collects data from or about a plurality of industrial entities in the IIoT system; an industrial entity-oriented data storage systems layer that stores the data collected by the industrial monitoring systems layer; an adaptive intelligent systems layer that provisions available computing resources within the platform; and an industrial management application platform layer that includes one or more applications for performing a task in the IIoT system, monitoring performance of the task, or assisting with the performance of the task. The industrial entity-oriented data storage systems layer can include at least one geofenced virtual asset tag associated with one particular industrial entity of the plurality of industrial entities in the IIoT system, the at least one geofenced virtual asset tag comprising a data structure that contains entity data about the one particular industrial entity and is linked to proximity of the one particular industrial entity.

In some aspects, access to the at least one geofenced virtual asset tag is limited to devices, entities, and individuals within the proximity of the one particular industrial entity.

In some aspects, access to the at least one geofenced virtual asset tag comprises reading, writing, and modifying the data of the at least one geofenced virtual asset tag.

In some aspects, access to the at least one geofenced virtual asset tag is limited by use of an encryption key.

In some aspects, the at least one geofenced virtual asset tag is configured to recognize a presence of a data reading device and communicate to the data reading device.

In some aspects, the at least one geofenced virtual asset tag communicates with the data reading device via one or more protocol adaptors.

In some aspects, the one particular industrial entity comprises a machine in an industrial environment of the IIoT system.

In some aspects, the one particular industrial entity comprises an item of equipment in an industrial environment of the IIoT system.

In some aspects, the one particular industrial entity comprises an item of inventory in an industrial environment of the IIoT system.

In some aspects, the one particular industrial entity comprises a manufactured article in an industrial environment of the IIoT system.

In some aspects, the one particular industrial entity comprises a component in an industrial environment of the IIoT system.

In some aspects, the one particular industrial entity comprises a tool in an industrial environment of the IIoT system.

In some aspects, the one particular industrial entity comprises a device in an industrial environment of the IIoT system.

In some aspects, the one particular industrial entity comprises a worker in an industrial environment of the IIoT system.

In some aspects, the platform can further comprise a set of IIoT devices in an industrial environment, wherein the plurality of industrial entities in the IIoT system includes the set of IIoT devices.

In some aspects, the set of IIoT devices act as distributed blockchain nodes in a blockchain system of the IIoT system.

In some aspects, the set of IIoT devices validates location and identity of the one particular industrial entity associated with the at least one geofenced virtual asset tag.

In some aspects, the validation utilizes voting protocols.

In some aspects, the validation utilizes consensus protocols.

In some aspects, the at least one geofenced virtual asset tag includes information related to a history of the one particular industrial entity or one or more components of the one particular industrial entity.

Further areas of applicability of the present disclosure will become apparent from the detailed description provided hereinafter. It should be understood that the detailed description and specific examples are intended for purposes of illustration only and are not intended to limit the scope of the disclosure.

BRIEF DESCRIPTION OF THE FIGURES

Figures 1 through Figure 5 are diagrammatic views that each depicts portions of an overall view of an industrial Internet of Things (IoT) data collection, monitoring and control system in accordance with the present disclosure.

Figure 6 is a diagrammatic view of a platform including a local data collection system disposed in an industrial environment for collecting data from or about the elements of the environment, such as machines, components, systems, sub-systems, ambient conditions, states, workflows, processes, and other elements in accordance with the present disclosure.

Figure 7 is a diagrammatic view that depicts elements of an industrial data collection system for collecting analog sensor data in an industrial environment in accordance with the present disclosure.

Figure 8 is a diagrammatic view of a rotating or oscillating machine having a data acquisition module that is configured to collect waveform data in accordance with the present disclosure.

Figure 9 is a diagrammatic view of an exemplary tri-axial sensor mounted to a motor bearing of an exemplary rotating machine in accordance with the present disclosure.

Figure 10 is a diagrammatic view of components and interactions of a data collection architecture involving application of cognitive and machine learning systems to data collection and processing in accordance with the present disclosure.

Figure 11 is a diagrammatic view of components and interactions of a data collection architecture involving application of a platform having a cognitive data marketplace in accordance with the present disclosure.

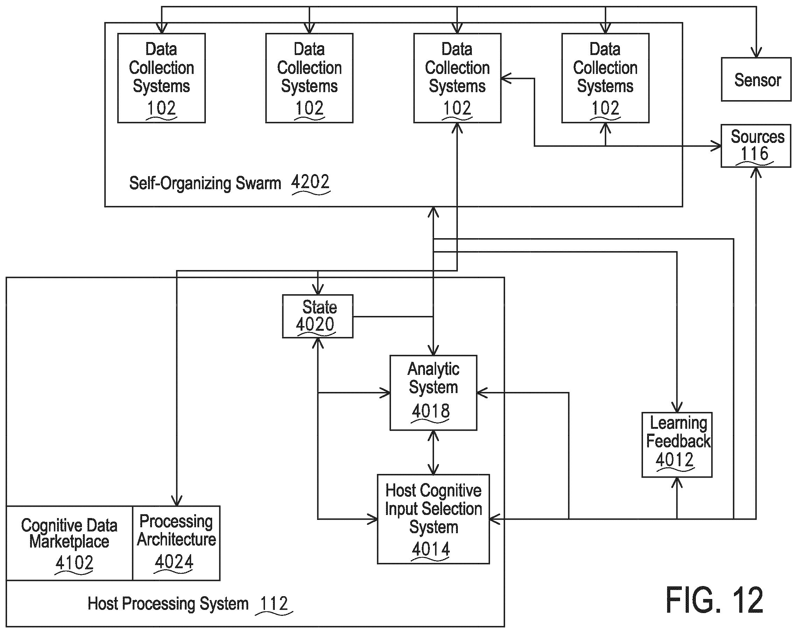

Figure 12 is a diagrammatic view of components and interactions of a data collection architecture involving application of a self-organizing swarm of data collectors in accordance with the present disclosure.

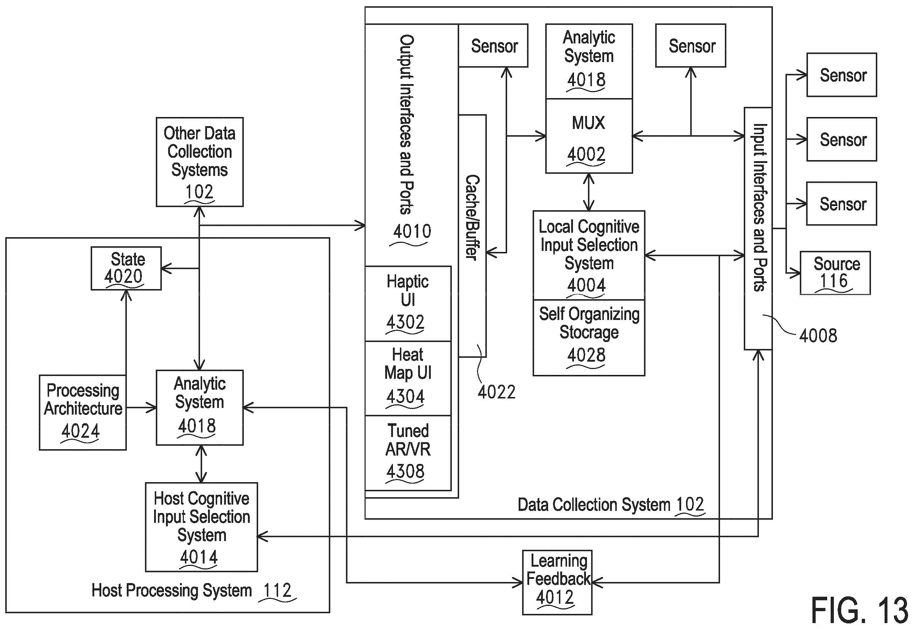

Figure 13 is a diagrammatic view of components and interactions of a data collection architecture involving application of a haptic user interface in accordance with the present disclosure.

Figure 14 is a diagrammatic view of a multi-format streaming data collection system in accordance with the present disclosure.

Figure 15 is a diagrammatic view of combining legacy and streaming data collection and storage in accordance with the present disclosure.

Figure 16 is a diagrammatic view of industrial machine sensing using both legacy and updated streamed sensor data processing in accordance with the present disclosure.

Figure 17 is a diagrammatic view of an industrial machine sensed data processing system that facilitates portal algorithm use and alignment of legacy and streamed sensor data in accordance with the present disclosure.

Figure 18 is a diagrammatic view of components and interactions of a data collection architecture involving a streaming data acquisition instrument receiving analog sensor signals from an industrial environment connected to a cloud network facility in accordance with the present disclosure.

Figure 19 is a diagrammatic view of components and interactions of a data collection architecture involving a streaming data acquisition instrument having an alarms module, expert analysis module, and a driver API to facilitate communication with a cloud network facility in accordance with the present disclosure.

Figure 20 is a diagrammatic view of components and interactions of a data collection architecture involving a streaming data acquisition instrument and first in, first out memory architecture to provide a real time operating system in accordance with the present disclosure.

Figure 21 is a diagrammatic view of components and interactions of a data collection architecture involving a multiple streaming data acquisition instrument receiving analog sensor signals and digitizing those signals to be obtained by a streaming hub server in accordance with the present disclosure.

Figure 22 is a diagrammatic view of components and interactions of a data collection architecture involving a master raw data server that processes new streaming data and data already extracted and processed in accordance with the present disclosure.

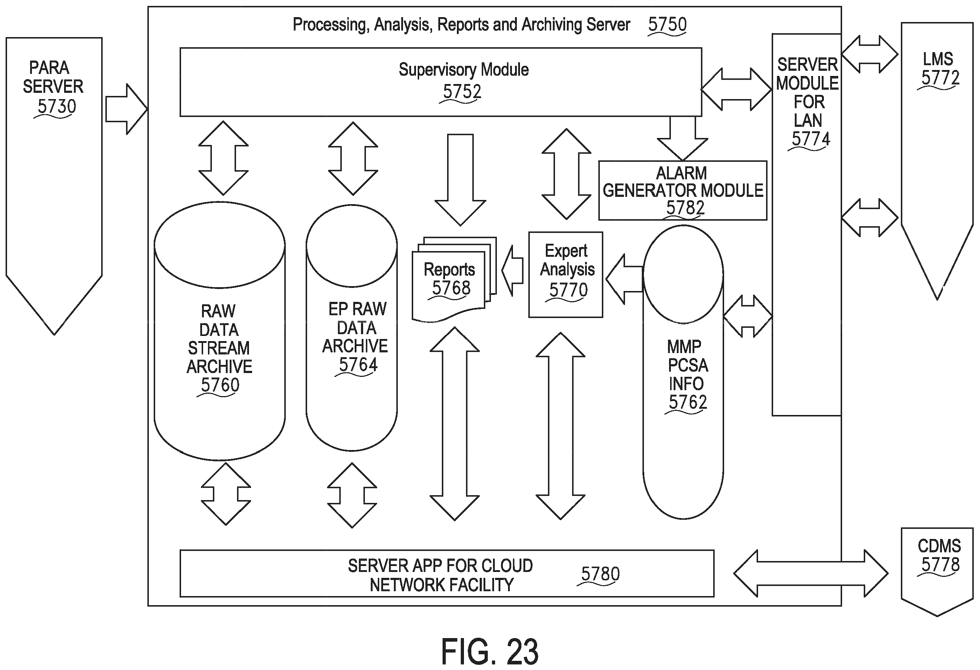

Figure 23, Figure 24, and Figure 25 are diagrammatic views of components and interactions of a data collection architecture involving a processing, analysis, report, and archiving server that processes new streaming data and data already extracted and processed in accordance with the present disclosure.

Figure 26 is a diagrammatic view of components and interactions of a data collection architecture involving a relation database server and data archives and their connectivity with a cloud network facility in accordance with the present disclosure.

Figure 27 through Figure 32 are diagrammatic views of components and interactions of a data collection architecture involving a virtual streaming data acquisition instrument receiving analog sensor signals from an industrial environment connected to a cloud network facility in accordance with the present disclosure.

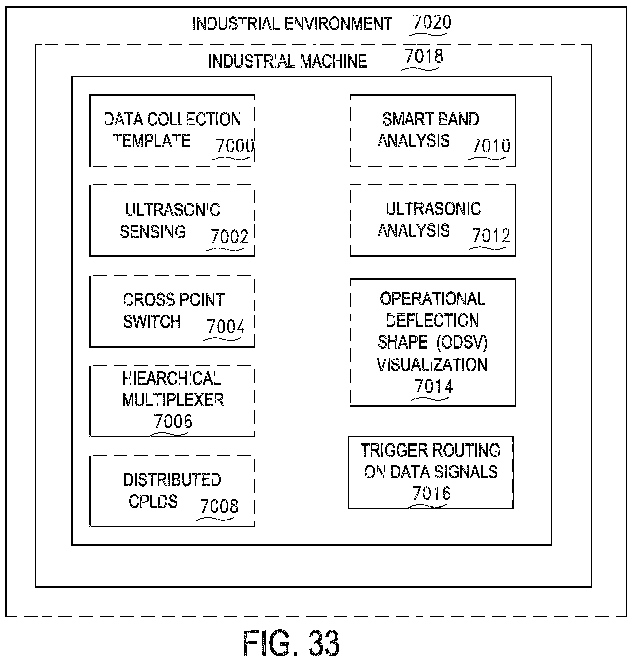

Figure 33 through Figure 40 are diagrammatic views of components and interactions of a data collection architecture involving data channel methods and systems for data collection of industrial machines in accordance with the present disclosure.

Figure 41 is a diagrammatic view that depicts embodiments of a data monitoring device in accordance with the present disclosure.

Figure 42 and Figure 43 are diagrammatic views that depict embodiments of a data monitoring device in accordance with the present disclosure.

Figure 44 is a diagrammatic view that depicts embodiments of a data monitoring device in accordance with the present disclosure.

Figures 45 and 46 are diagrammatic views that depict an embodiment of a system for data collection in accordance with the present disclosure.

Figures 47 and 48 are diagrammatic views that depict an embodiment of a system for data collection comprising a plurality of data monitoring devices in accordance with the present disclosure.

Figure 49 depicts an embodiment of a data monitoring device incorporating sensors in accordance with the present disclosure.

Figures 50 and 51 are diagrammatic views that depict embodiments of a data monitoring device in communication with external sensors in accordance with the present disclosure.

Figure 52 is a diagrammatic view that depicts embodiments of a data monitoring device with additional detail in the signal evaluation circuit in accordance with the present disclosure.

Figure 53 is a diagrammatic view that depicts embodiments of a data monitoring device with additional detail in the signal evaluation circuit in accordance with the present disclosure.

Figure 54 is a diagrammatic view that depicts embodiments of a data monitoring device with additional detail in the signal evaluation circuit in accordance with the present disclosure.

Figure 55 is a diagrammatic view that depicts embodiments of a system for data collection in accordance with the present disclosure.

Figure 56 is a diagrammatic view that depicts embodiments of a system for data collection comprising a plurality of data monitoring devices in accordance with the present disclosure.

Figure 57 is a diagrammatic view that depicts embodiments of a data monitoring device in accordance with the present disclosure.

Figures 58 and 59 are diagrammatic views that depict embodiments of a data monitoring device in accordance with the present disclosure.

Figures 60 and 61 are diagrammatic views that depict embodiments of a data monitoring device in accordance with the present disclosure.

Figures 62 and 63 are diagrammatic views that depict embodiments of a data monitoring device in accordance with the present disclosure.

Figures 64 and 65 is a diagrammatic view that depicts embodiments of a system for data collection comprising a plurality of data monitoring devices in accordance with the present disclosure.

Figure 66 is a diagrammatic view that depicts embodiments of a data monitoring device in accordance with the present disclosure.

Figures 67 and 68 are diagrammatic views that depict embodiments of a data monitoring device in accordance with the present disclosure.

Figure 69 is a diagrammatic view that depicts embodiments of a data monitoring device in accordance with the present disclosure.

Figure 70 is a diagrammatic view that depicts embodiments of a data monitoring device in accordance with the present disclosure.

Figures 71 and 72 are diagrammatic views that depict embodiments of a system for data collection in accordance with the present disclosure.

Figures 73 and 74 are diagrammatic views that depict embodiments of a system for data collection comprising a plurality of data monitoring devices in accordance with the present disclosure.

Figure 75 is a diagrammatic view that depicts embodiments of a data monitoring device in accordance with the present disclosure.

Figures 76 and 77 are diagrammatic views that depict embodiments of a data monitoring device in accordance with the present disclosure.

Figure 78 is a diagrammatic view that depicts embodiments of a data monitoring device in accordance with the present disclosure.

Figures 79 and 80 are diagrammatic views that depict embodiments of a system for data collection in accordance with the present disclosure.

Figures 81 and 82 are diagrammatic views that depict embodiments of a system for data collection comprising a plurality of data monitoring devices in accordance with the present disclosure.

Figure 83 is a diagrammatic view that depicts embodiments of a data monitoring device in accordance with the present disclosure.

Figures 84 and 85 are diagrammatic views that depict embodiments of a data monitoring device in accordance with the present disclosure.

Figure 86 is a diagrammatic view that depicts embodiments of a data monitoring device in accordance with the present disclosure.

Figures 87 and 88 are diagrammatic views that depict embodiments of a system for data collection in accordance with the present disclosure.

Figures 89 and 90 are diagrammatic views that depict embodiments of a system for data collection comprising a plurality of data monitoring devices in accordance with the present disclosure.

Figure 91 is a diagrammatic view that depicts embodiments of a data monitoring device in accordance with the present disclosure.

Figures 92 and 93 are diagrammatic views that depict embodiments of a data monitoring device in accordance with the present disclosure.

Figure 94 is a diagrammatic view that depicts embodiments of a data monitoring device in accordance with the present disclosure.

Figures 95 and 96 are diagrammatic views that depict embodiments of a system for data collection in accordance with the present disclosure.

Figures 97 and 98 are diagrammatic views that depict embodiments of a system for data collection comprising a plurality of data monitoring devices in accordance with the present disclosure.

Figures 99 through Figure 101 are diagrammatic views of components and interactions of a data collection architecture involving a collector of route templates and the routing of data collectors in an industrial environment in accordance with the present disclosure.

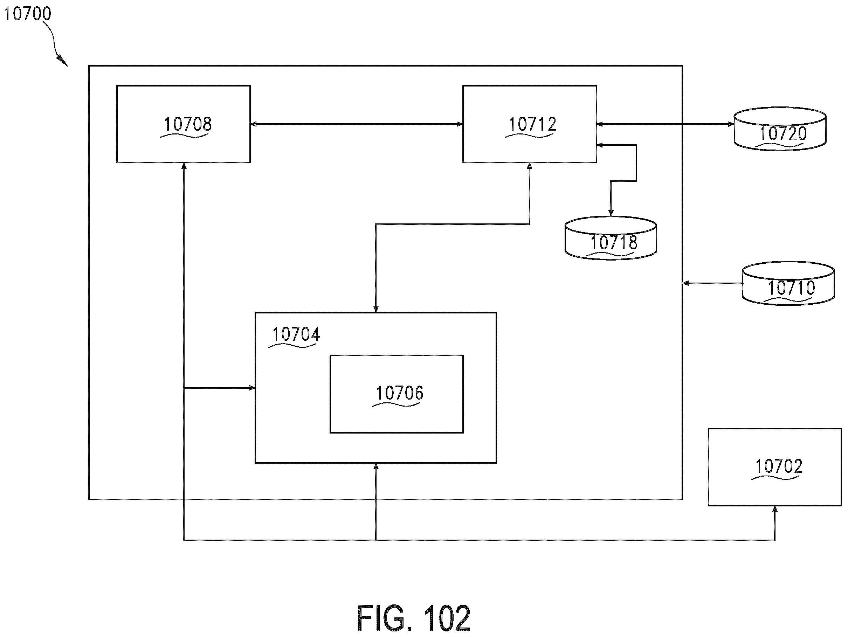

Figure 102 is a diagrammatic view that depicts a monitoring system that employs data collection bands in accordance with the present disclosure.

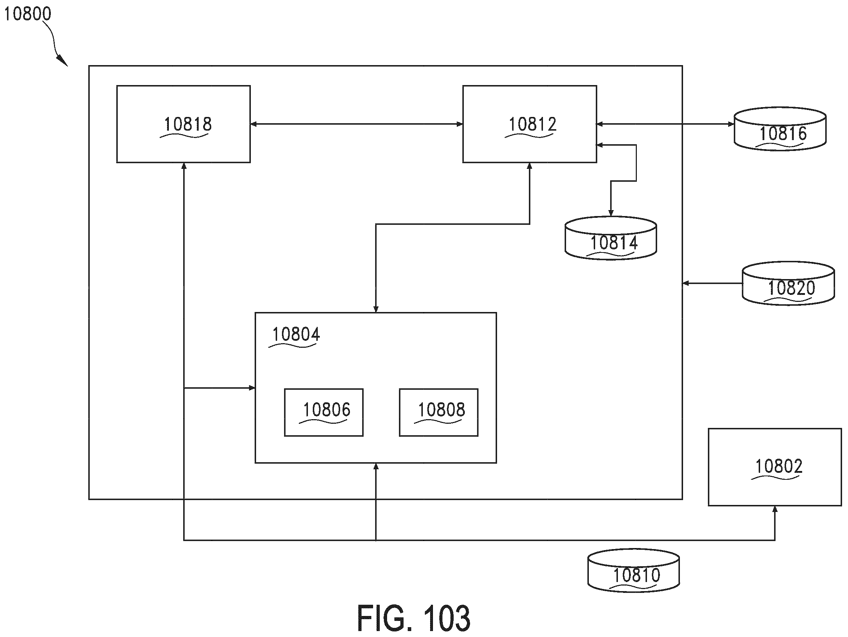

Figure 103 is a diagrammatic view that depicts a system that employs vibration and other noise in predicting states and outcomes in accordance with the present disclosure.

Figure 104 is a diagrammatic view that depicts a system for data collection in an industrial environment in accordance with the present disclosure.

Figure 105 is a diagrammatic view that depicts an apparatus for data collection in an industrial environment in accordance with the present disclosure.

Figure 106 is a schematic flow diagram of a procedure for data collection in an industrial environment in accordance with the present disclosure.

Figure 107 is a diagrammatic view that depicts a system for data collection in an industrial environment in accordance with the present disclosure.

Figure 108 is a diagrammatic view that depicts an apparatus for data collection in an industrial environment in accordance with the present disclosure.

Figure 109 is a schematic flow diagram of a procedure for data collection in an industrial environment in accordance with the present disclosure.

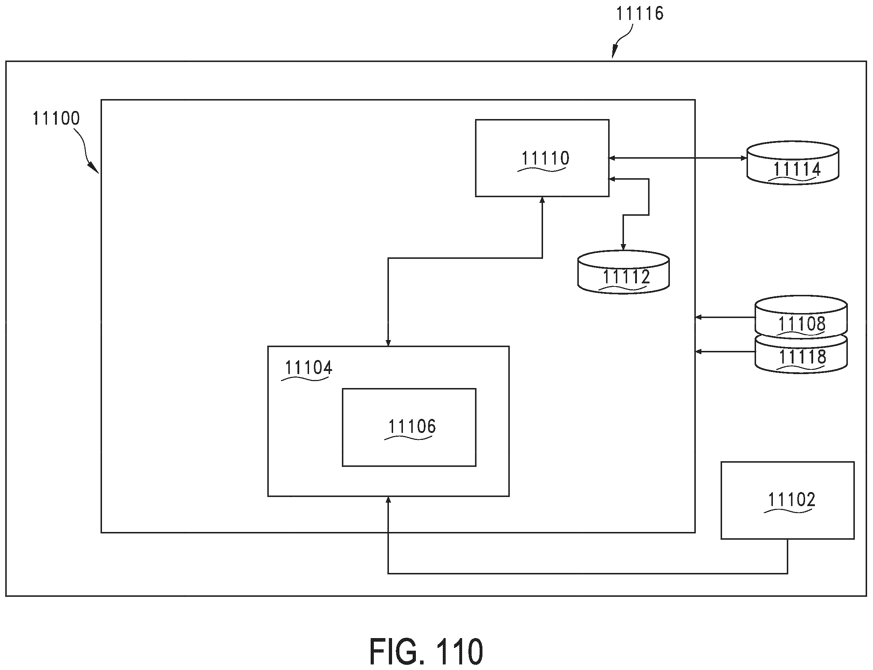

Figure 110 is a diagrammatic view that depicts industry-specific feedback in an industrial environment in accordance with the present disclosure.

Figure 111 is a diagrammatic view that depicts an exemplary user interface for smart band configuration of a system for data collection in an industrial environment is depicted in accordance with the present disclosure.

Figure 112 is a diagrammatic view that depicts a graphical approach 11300 for back-calculation in accordance with the present disclosure.

Figure 113 is a diagrammatic view that depicts a wearable haptic user interface device for providing haptic stimuli to a user that is responsive to data collected in an industrial environment by a system adapted to collect data in the industrial environment in accordance with the present disclosure.

Figure 114 is a diagrammatic view that depicts an augmented reality display of heat maps based on data collected in an industrial environment by a system adapted to collect data in the environment in accordance with the present disclosure.

Figure 115 is a diagrammatic view that depicts an augmented reality display including real time data overlaying a view of an industrial environment in accordance with the present disclosure.

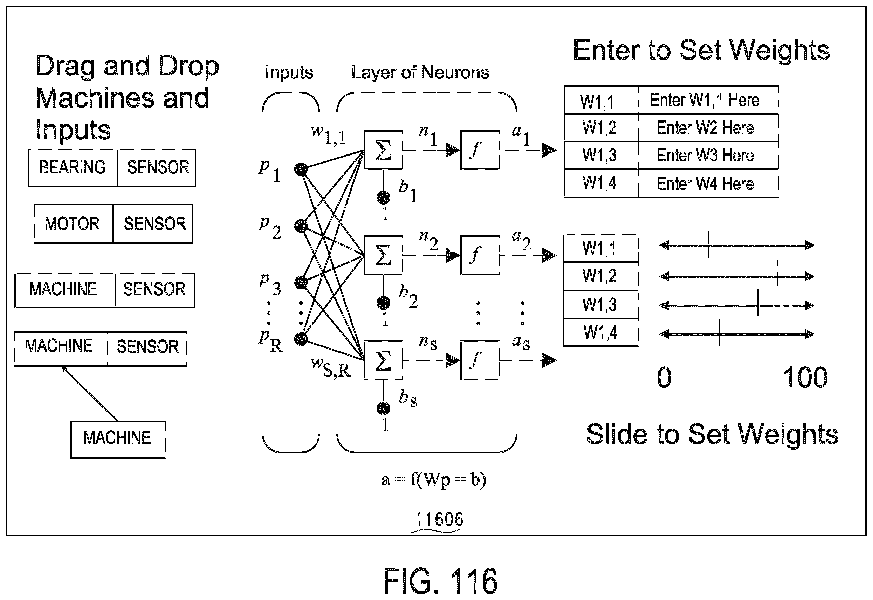

Figure 116 is a diagrammatic view that depicts a user interface display and components of a neural net in a graphical user interface in accordance with the present disclosure.

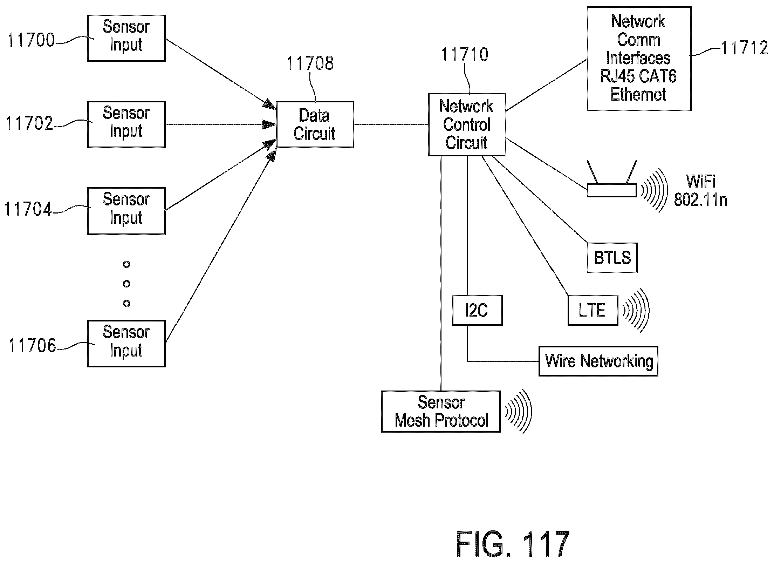

Figure 117 is a diagrammatic view of components and interactions of a data collection architecture involving swarming data collectors and sensor mesh protocol in an industrial environment in accordance with the present disclosure.

Figure 118 is a diagrammatic view that depicts data collection system according to some aspects of the present disclosure.

Figure 119 is a diagrammatic view that depicts a system for self-organized, network-sensitive data collection in an industrial environment in accordance with the present disclosure.

Figure 120 is a diagrammatic view that depicts an apparatus for self-organized, network-sensitive data collection in an industrial environment in accordance with the present disclosure.

Figure 121 is a diagrammatic view that depicts an apparatus for self-organized, network-sensitive data collection in an industrial environment in accordance with the present disclosure.

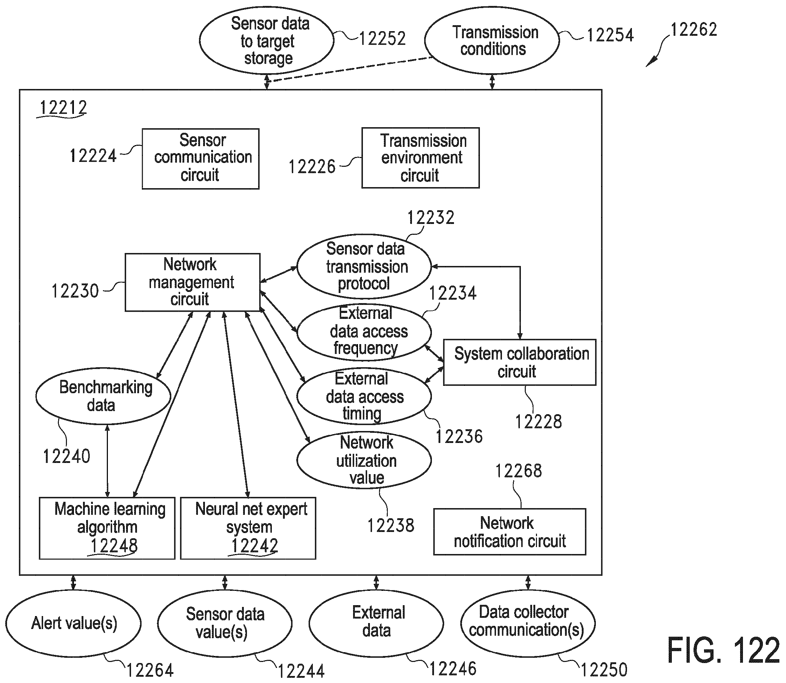

Figure 122 is a diagrammatic view that depicts an apparatus for self-organized, network-sensitive data collection in an industrial environment in accordance with the present disclosure.

Figure 123 and Figure 124 are diagrammatic views that depict embodiments of transmission conditions in accordance with the present disclosure.

Figure 125 is a diagrammatic view that depicts embodiments of a sensor data transmission protocol in accordance with the present disclosure.

Figure 126 and Figure 127 are diagrammatic views that depict embodiments of benchmarking data in accordance with the present disclosure.

Figure 128 is a diagrammatic view that depicts embodiments of a system for data collection and storage in an industrial environment in accordance with the present disclosure.

Figure 129 is a diagrammatic view that depicts embodiments of an apparatus for self-organizing storage for data collection for an industrial system in accordance with the present disclosure.

Figure 130 is a diagrammatic view that depicts embodiments of a storage time definition in accordance with the present disclosure.

Figure 131 is a diagrammatic view that depicts embodiments of a data resolution description in accordance with the present disclosure.

Figure 132 and Figure 133 diagrammatic views of an apparatus for self-organizing network coding for data collection for an industrial system in accordance with the present disclosure.

Figure 134 and Figure 135 diagrammatic views of data marketplace interacting with data collection in an industrial system in accordance with the present disclosure.

Figure 136 is a diagrammatic view that depicts a smart heating system as an element in a network for in an industrial Internet of Things ecosystem in accordance with the present disclosure.

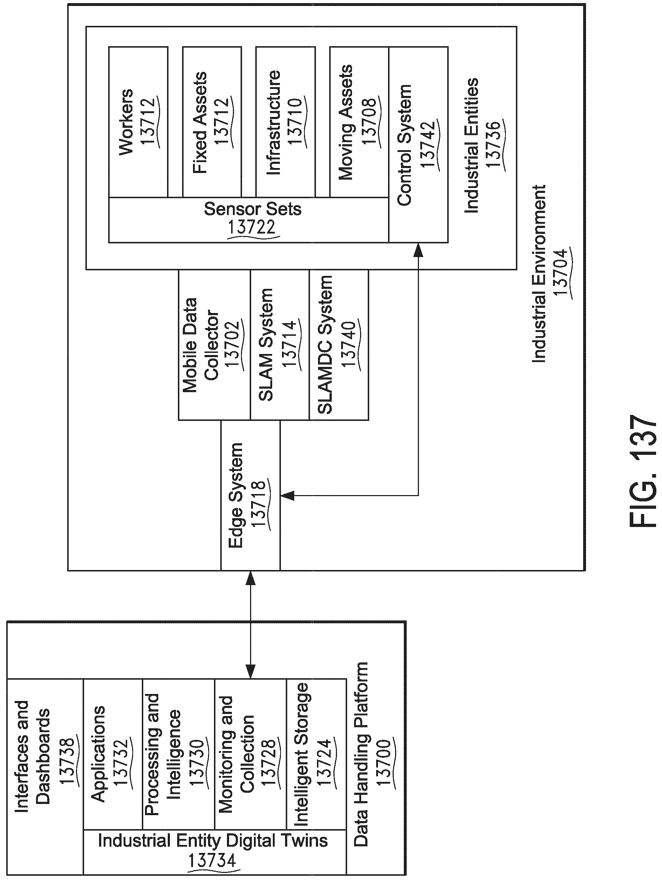

Figure 137 is a diagrammatic view that depicts an architecture, its components and functional relationships for an industrial Internet of Things solution in accordance with the present disclosure.

Figure 138 is a schematic illustrating an example of a sensor kit deployed in an industrial setting according to some embodiments of the present disclosure.

Figure 139 is a schematic illustrating an example of a sensor kit network having a star network topology according to some embodiments of the present disclosure.

Figure 140 is a schematic illustrating an example of a sensor kit network having a mesh network topology according to some embodiments of the present disclosure.

Figure 141 is a schematic illustrating an example of a sensor kit network having a hierarchical network topology according to some embodiments of the present disclosure.

Figure 142 is a schematic illustrating an example of a sensor according to some embodiments of the present disclosure.

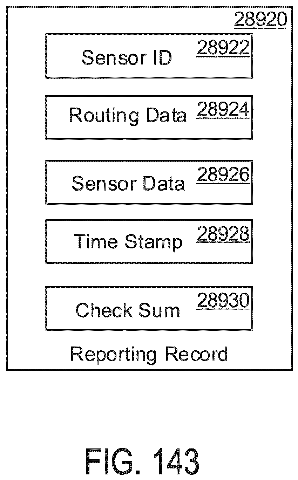

Figure 143 is a schematic illustrating an example schema of a reporting packet according to some embodiments of the present disclosure.

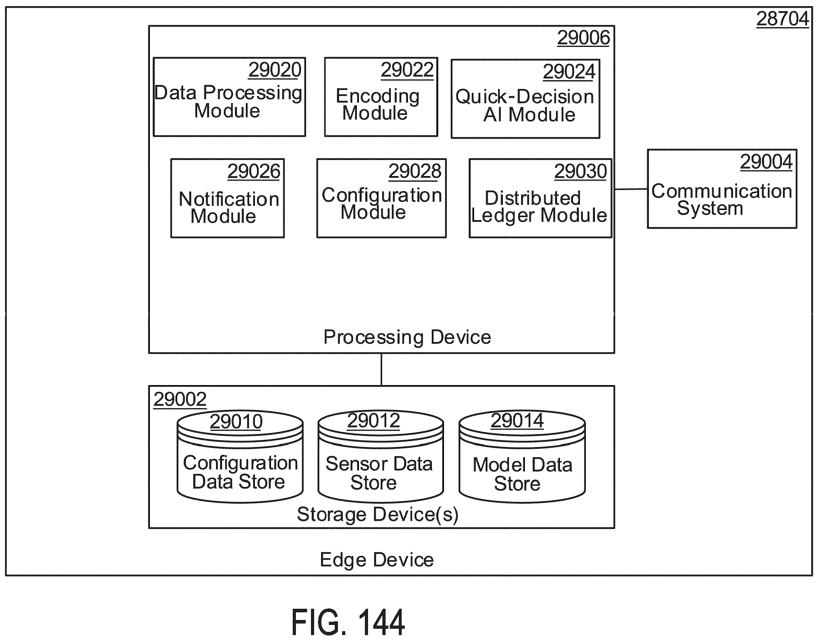

Figure 144 is a schematic illustrating an example of an edge device of a sensor kit according to some embodiments of the present disclosure.

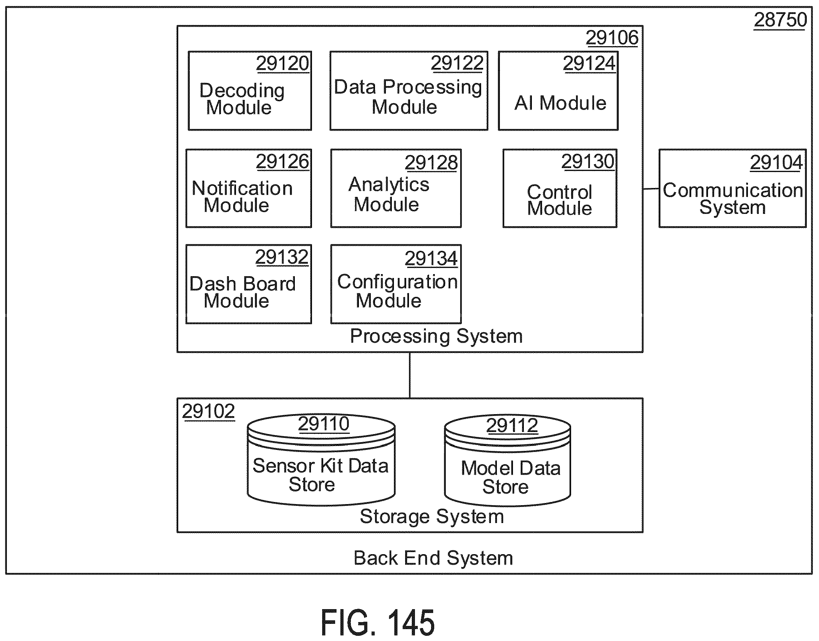

Figure 145 is a schematic illustrating an example of a backend system that receives sensor data from sensor kits deployed in industrial settings according to some embodiments of the present disclosure.

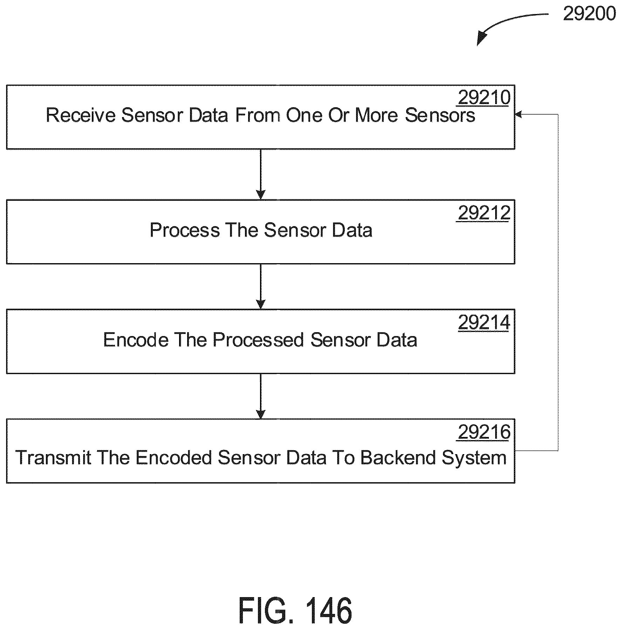

Figure 146 is a flow chart illustrating an example set of operations of a method for encoding sensor data captured by a sensor kit according to some embodiments of the present disclosure.

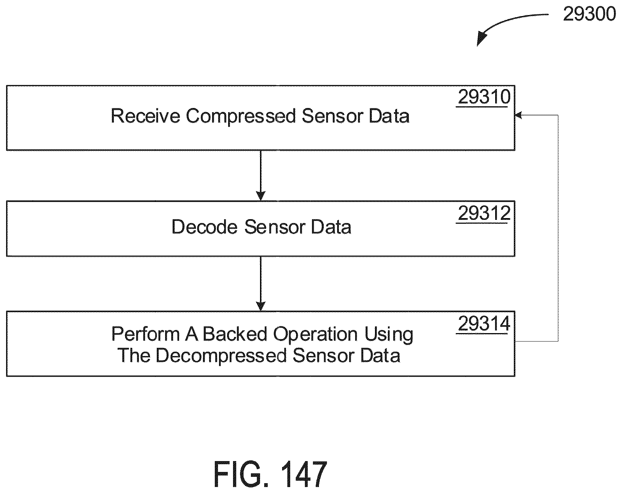

Figure 147 is a flow chart illustrating an example set of operations of a method for decoding sensor data provided to a backend system by a sensor kit according to some embodiments of the present disclosure.

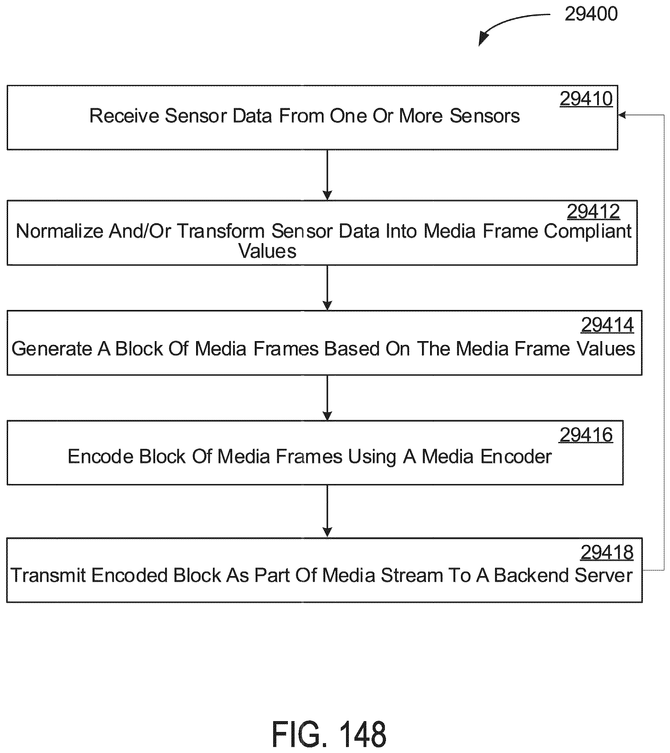

Figure 148 is a flow chart illustrating an example set of operations of a method for encoding sensor data captured by a sensor kit using a media codec according to some embodiments of the present disclosure.

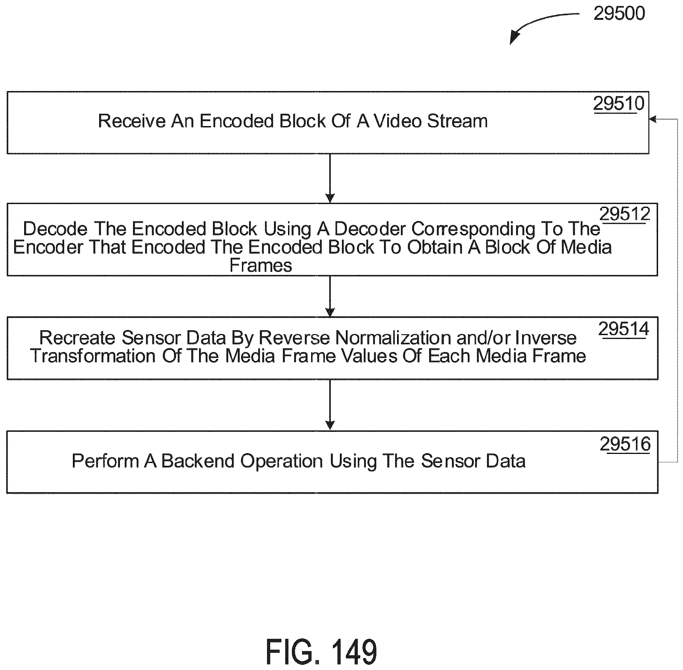

Figure 149 is a flow chart illustrating an example set of operations of a method for decoding sensor data provided to a backend system by a sensor kit using a media codec according to some embodiments of the present disclosure.

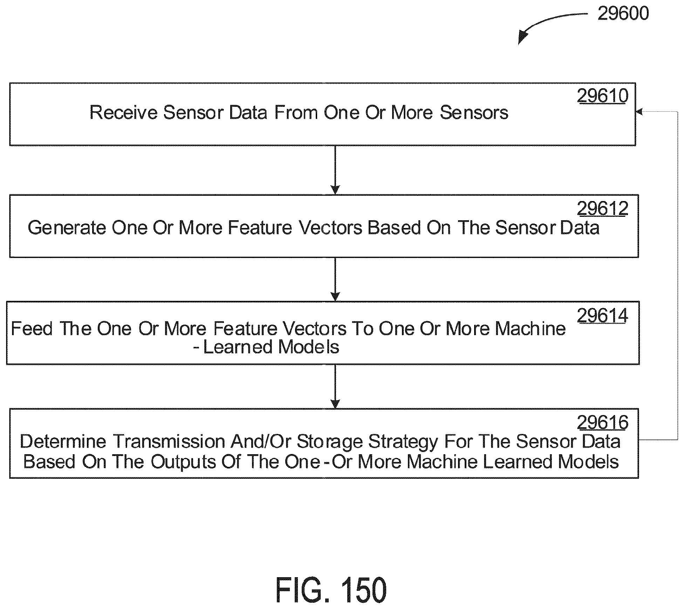

Figure 150 is a flow chart illustrating an example set of operations of a method for determining a transmission strategy and/or a storage strategy for sensor data collected by a sensor kit based on the sensor data, according to some embodiments of the present disclosure

Figures 151-155 are schematics illustrating different configurations of sensor kits according to some embodiments of the present disclosure.

Figure 156 is a flowchart illustrating an example set of operations of a method for monitoring industrial settings using an automatically configured backend system, according to some embodiments of the present disclosure.

Figure 157 is a plan view of a manufacturing facility illustrating an exemplary implementation of a sensor kit including an edge device, according to some embodiments of the present disclosure.

Figure 158 is a plan view of a surface portion of an underwater industrial facility illustrating an exemplary implementation of a sensor kit including an edge device, according to some embodiments of the present disclosure.

Figure 159 is a plan view of an indoor agricultural facility illustrating an exemplary implementation of a sensor kit including an edge device, according to some embodiments of the present disclosure.

Figure 160 is a schematic illustrating an example of a sensor kit in communication with a data handling platform according to some embodiments of the present disclosure.

Figures 161-164 are diagrammatic views that depict embodiments of a system for using one or more wearable devices for mobile data collection in accordance with the present disclosure.

Figures 165-167 are diagrammatic views that depict embodiments of a system for using one or more mobile robots and/or mobile vehicles for mobile data collection in accordance with the present disclosure.

Figures 168-171 are diagrammatic views that depict embodiments of a system for using one or more handheld devices for mobile data collection in accordance with the present disclosure.

Figures 172-174 are diagrammatic views that depict embodiments of a computer vision system in accordance with the present disclosure.

Figures 175-176 are diagrammatic views that depict embodiments of a deep learning system for training a computer vision system in accordance with the present disclosure.

Figure 177 depicts a predictive maintenance eco system network architecture.

Figure 178 depicts finding service workers using machine learning for the predictive maintenance eco-system of Figure 177.

Figure 179 depicts ordering parts and service in a predictive maintenance eco-system.

Figure 180 depicts deployment of smart RFID elements in an industrial machine environment.

Figure 181 depicts a generalized data structure for machine information in a smart RFID.

Figure 182 depicts a block level diagram of the storage structure of a smart RFID.

Figure 183 depicts an example of data stored in a smart RFID.

Figure 184 depicts a flow diagram of a method for collecting information from a machine.

Figure 185 depicts a flow diagram of a method for collecting data from a production environment.

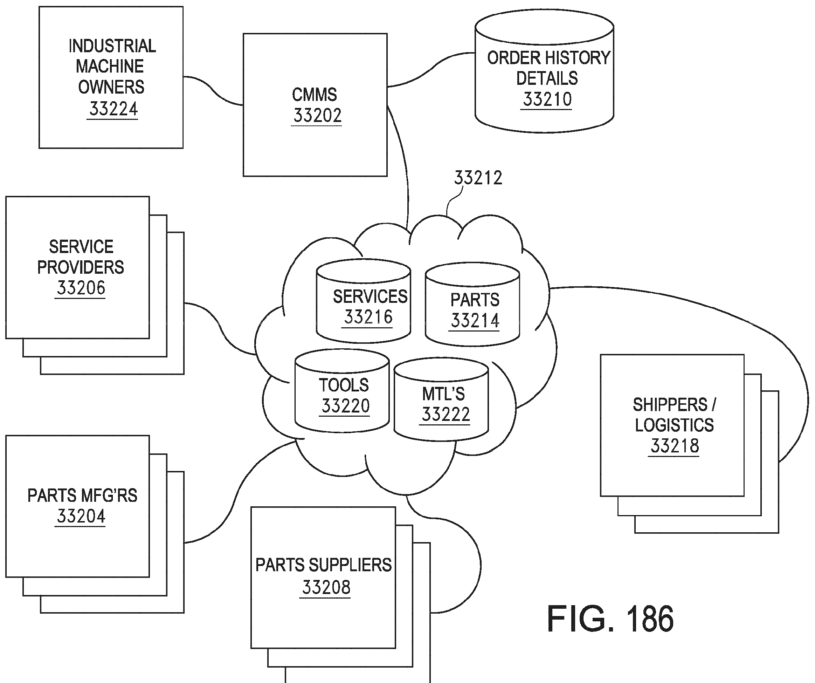

[0307] Figure 186 depicts an on-line maintenance management system with interfaces for data sources updating information in the on-line maintenance management system data storage.

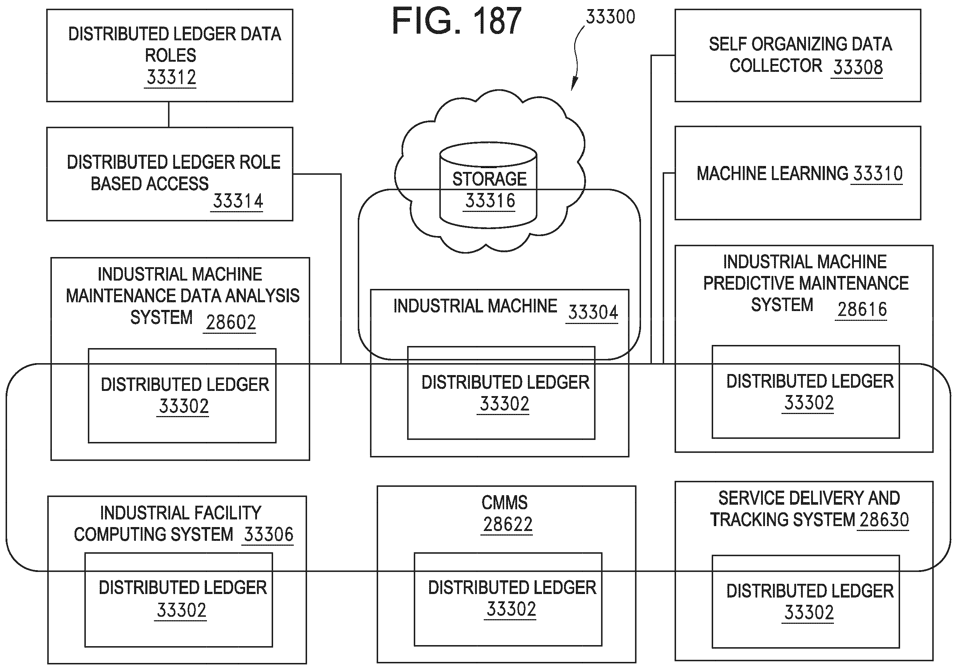

Figure 187 depicts a distributed ledger for predictive maintenance information with role-specific access thereof.

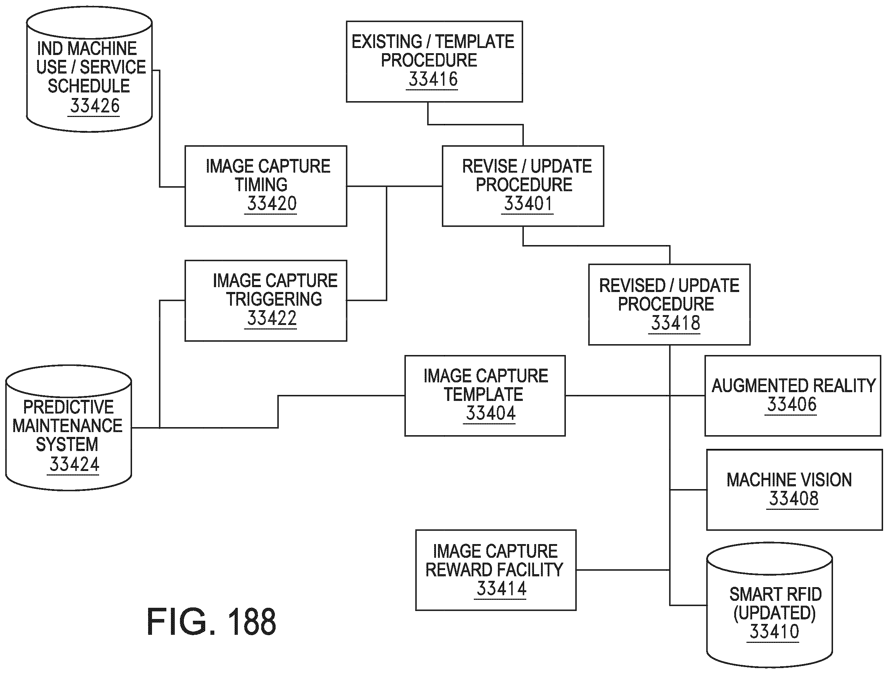

Figure 188 depicts a process for capturing images of portions of an industrial machine.

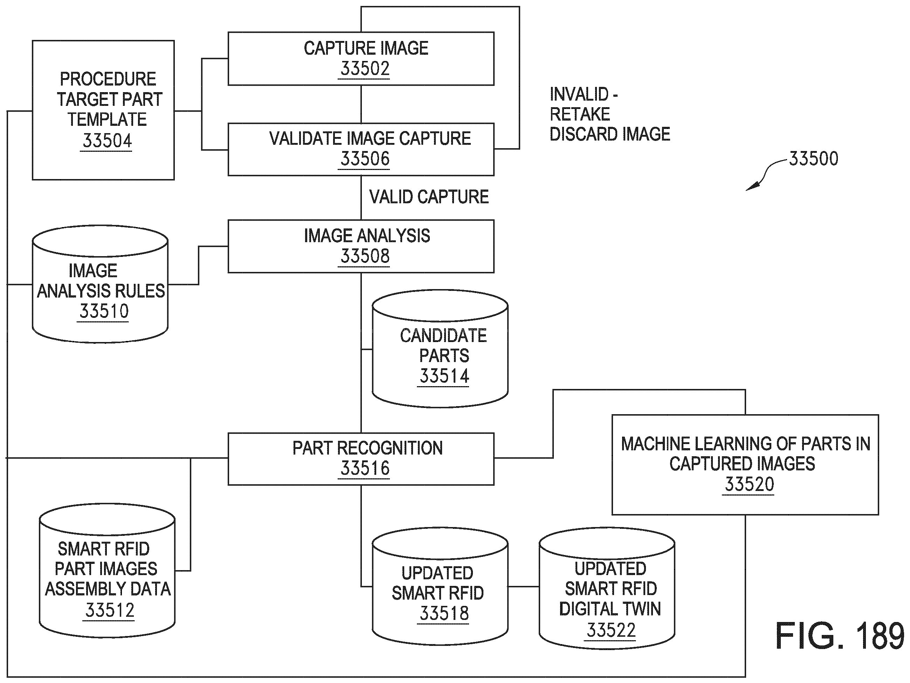

Figure 189 depicts a process that uses machine learning on images to recognize a likely internal structure of an industrial machine.

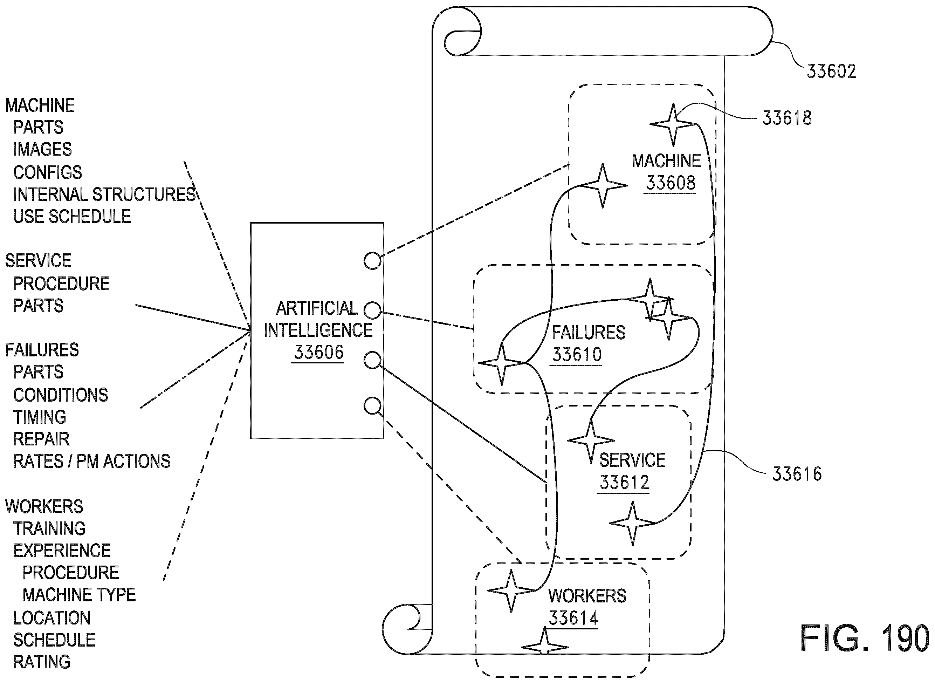

Figure 190 depicts a knowledge graph of the predictive maintenance gathering information.

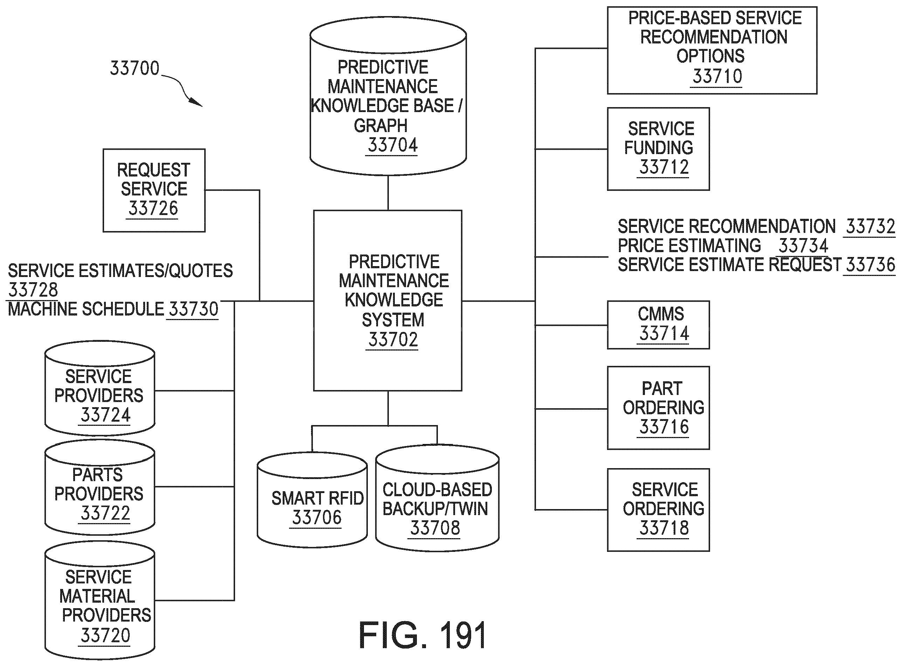

Figure 191 depicts an artificial intelligence system generating service recommendations and the like based on predictive maintenance analysis.

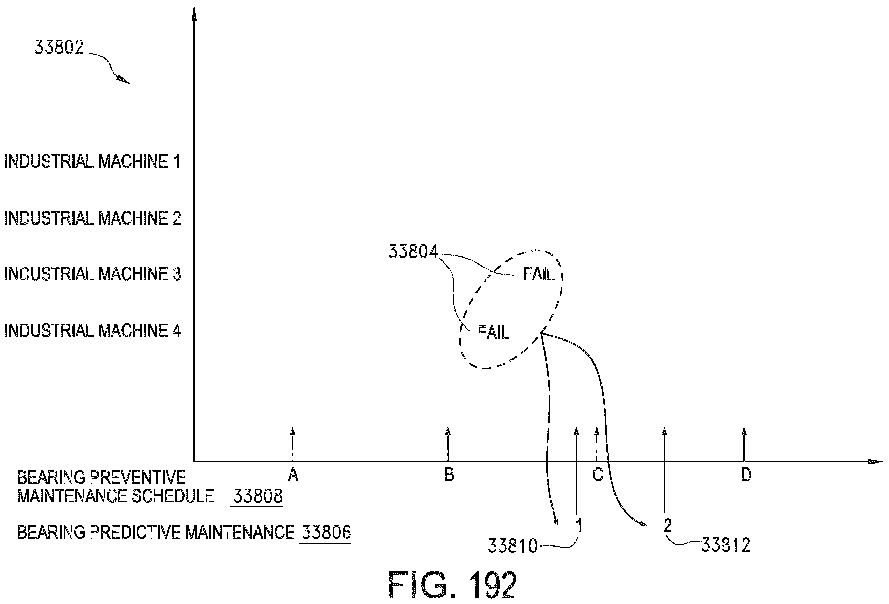

Figure 192 depicts a predictive maintenance timeline superimposed on a preventive maintenance timeline.

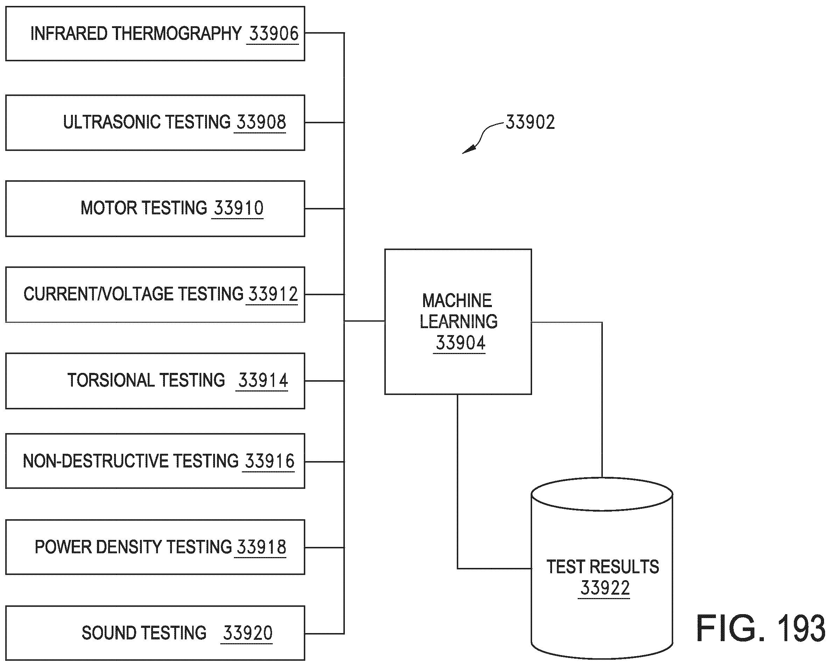

Figure 193 depicts a block diagram of potential sources of diagnostic information.

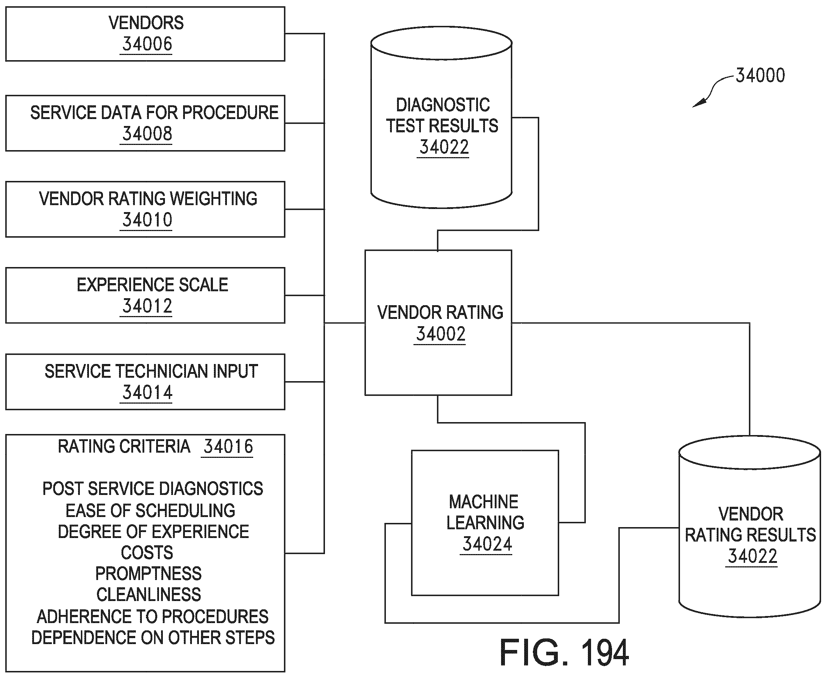

Figure 194 depicts a diagram of a process for rating vendors.

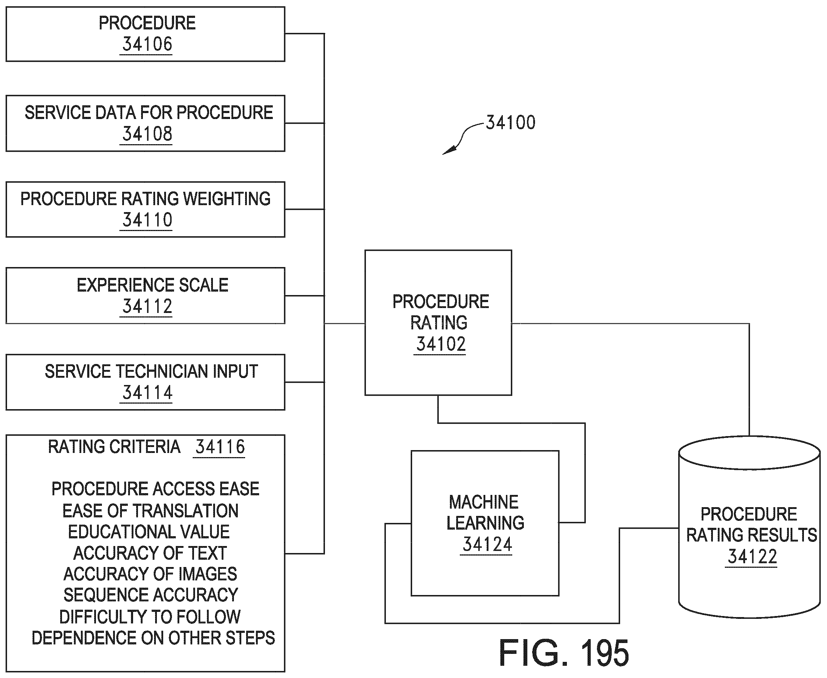

Figure 195 depicts a diagram of a process for rating procedures

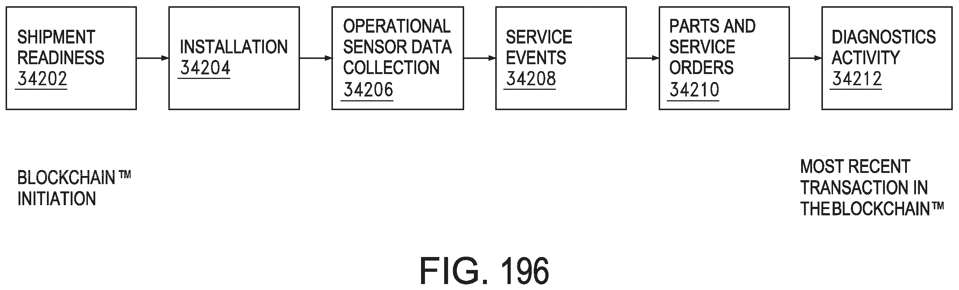

Figure 196 depicts a diagram of Blockchain applied to transactions of a predictive maintenance eco-system.

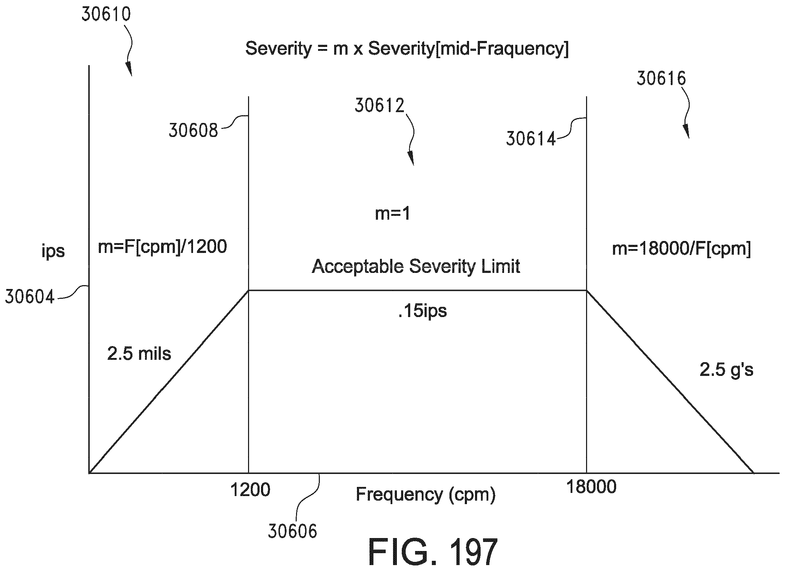

Figure 197 depicts a transfer function that facilitates converting vibration data into severity units.

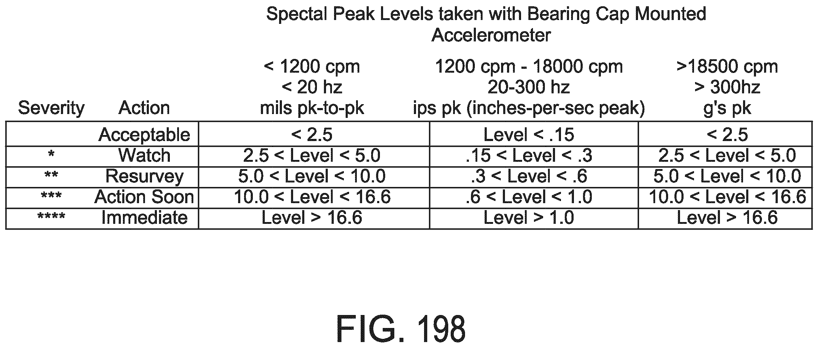

Figure 198 depicts a table that facilitates mapping vibration data to severity units.

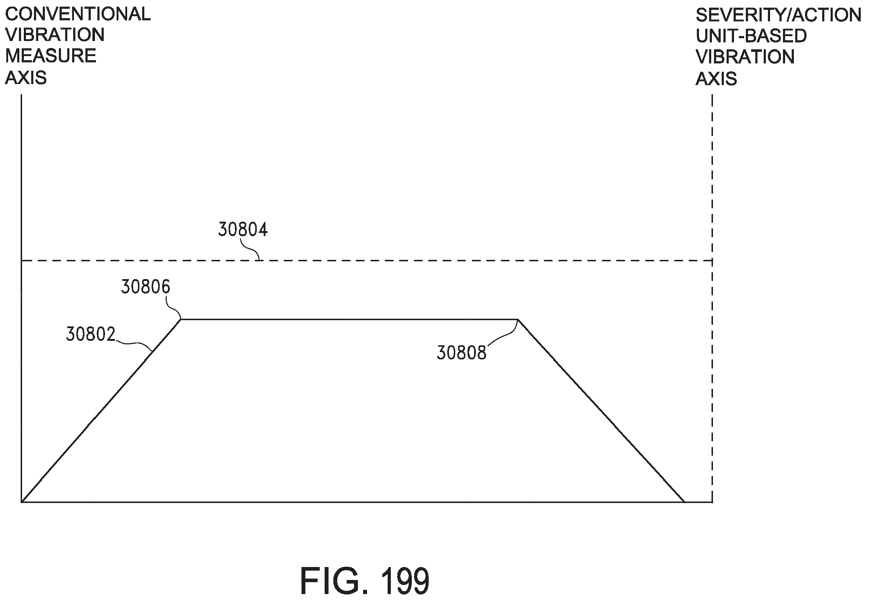

Figure 199 depicts a composite frequency graph for conventional vibration assessment and severity unit-based assessment.

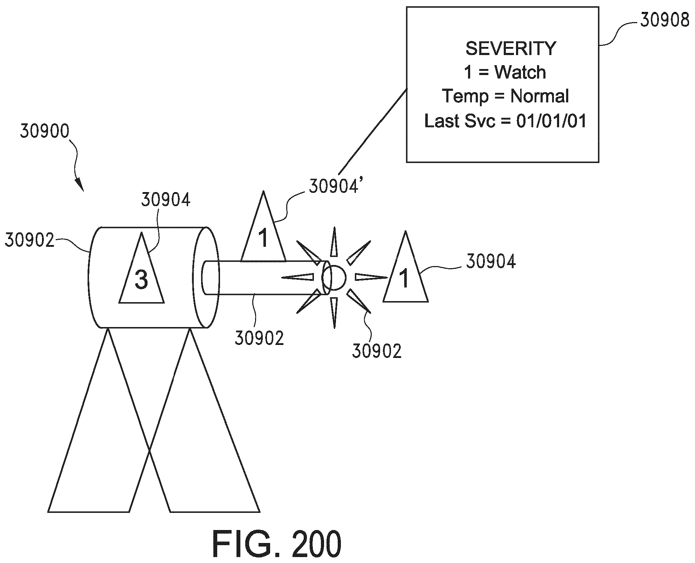

Figure 200 depicts a rendering of a portion of an industrial machine for use in an electronic user interface for depicting and discovering severity units and related information about a rotating component of the industrial machine.

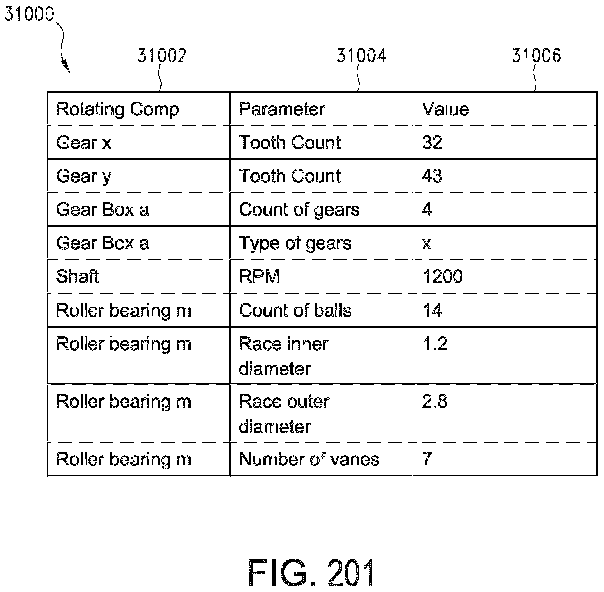

Figure 201 depicts a data table of rotating component design parameters for use in predicting maintenance events.

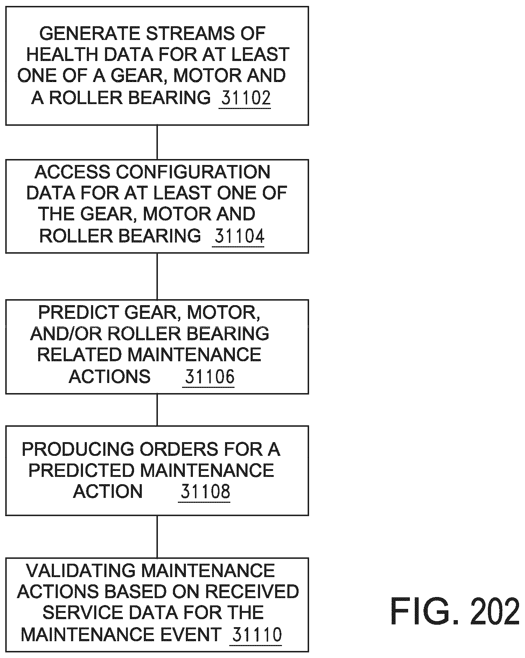

Figure 202 is a flow chart of predicting maintenance of at least one of a gear, motor and roller bearing based on severity unit and actuator count, such as count of teeth in a gear.

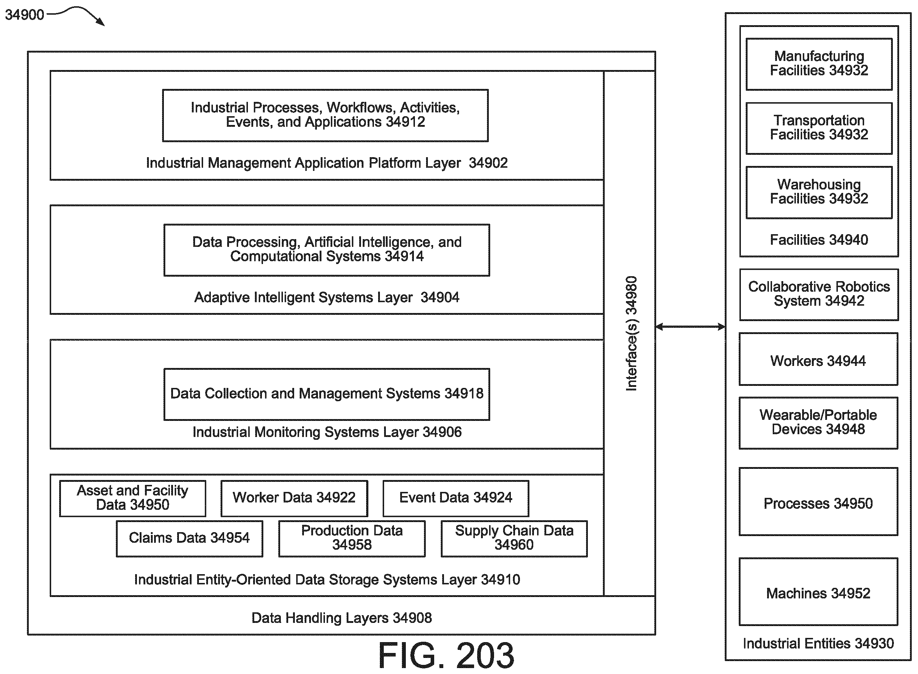

Figure 203 is a schematic diagram of an example platform for facilitating development of intelligence in an Industrial Internet of Things (IIoT) system according to some aspects of the present disclosure.

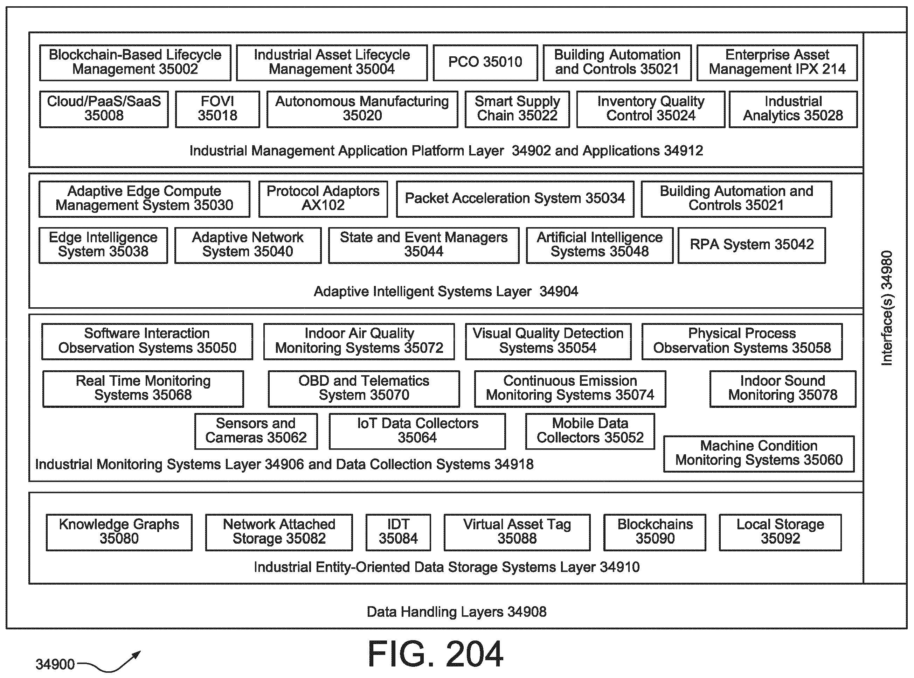

Figure 204 is a schematic diagram showing additional details, components, sub-systems, and other elements of an optional implementation of the example platform of Figure 203;

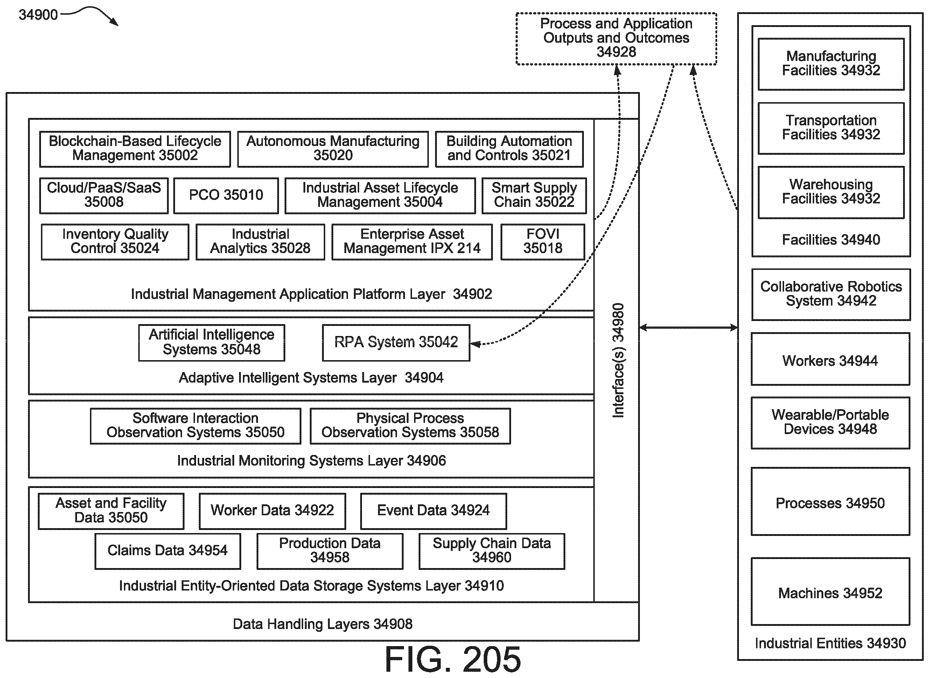

Figure 205 is a schematic diagram showing a robotic process automation ("RPA") system of the example platform of Figure 203;

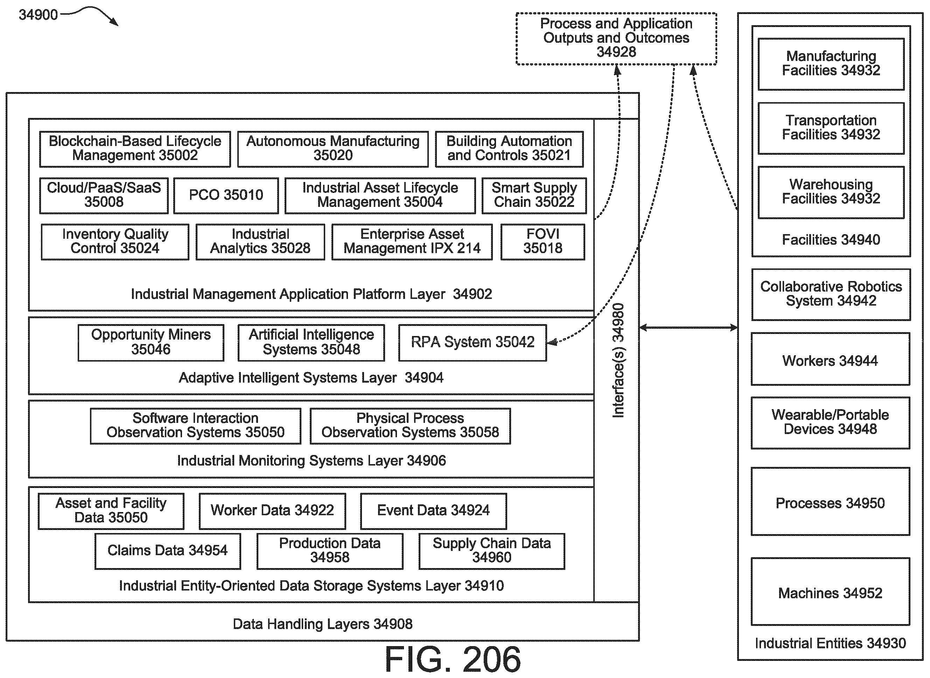

Figure 206 is a schematic diagram showing an opportunity mining system and an adaptive intelligence layer of the example platform of Figure 203;

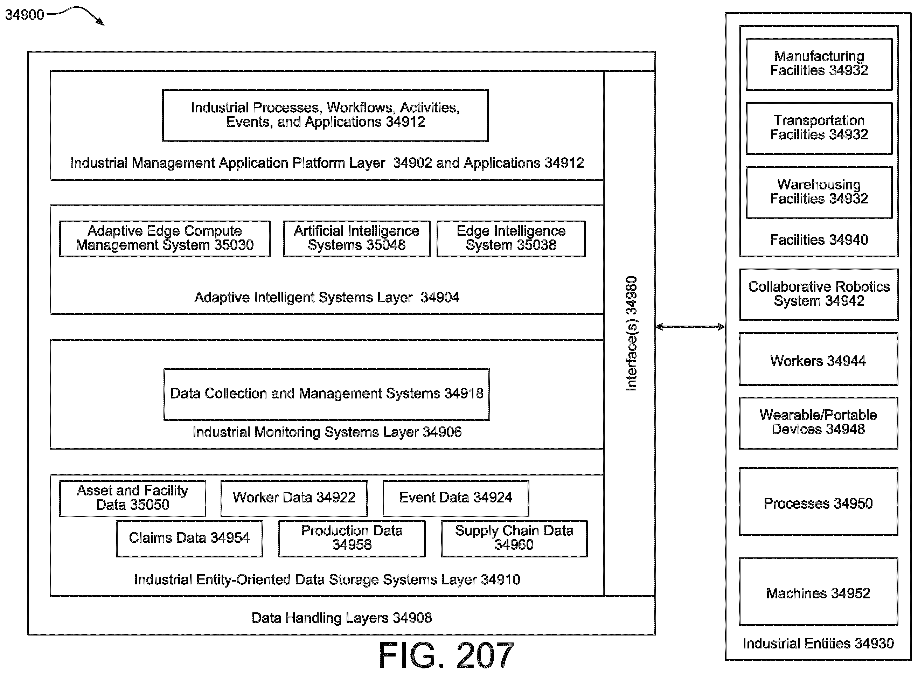

Figure 207 is a schematic diagram showing optional elements of the adaptive intelligent systems layer that facilitate improved edge intelligence of the example platform of Figure 203;

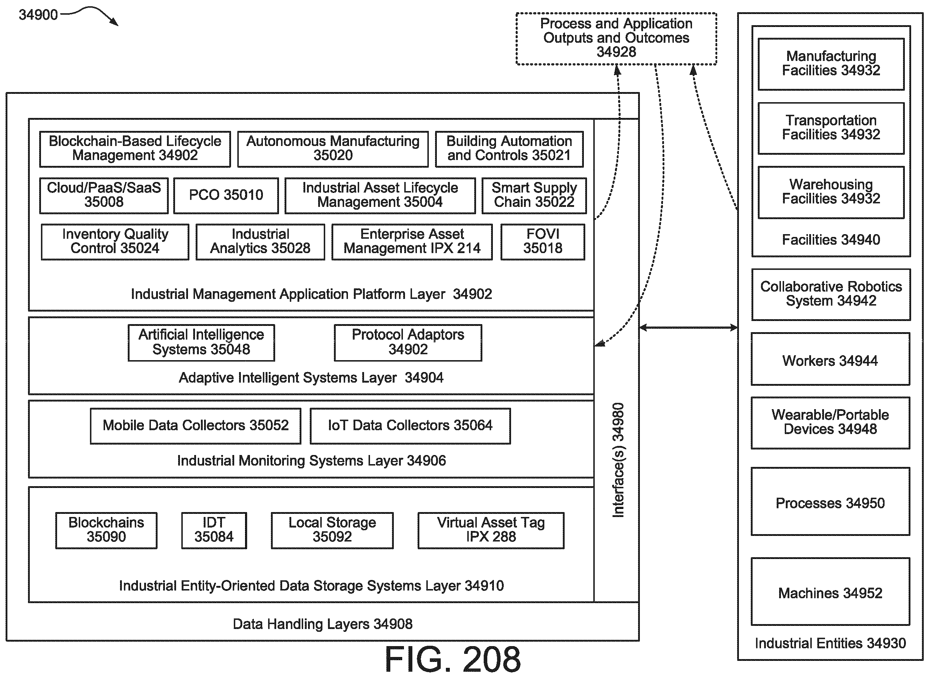

Figure 208 is a schematic diagram showing optional elements of an industrial entity-oriented data storage systems layer of the example platform of Figure 203;

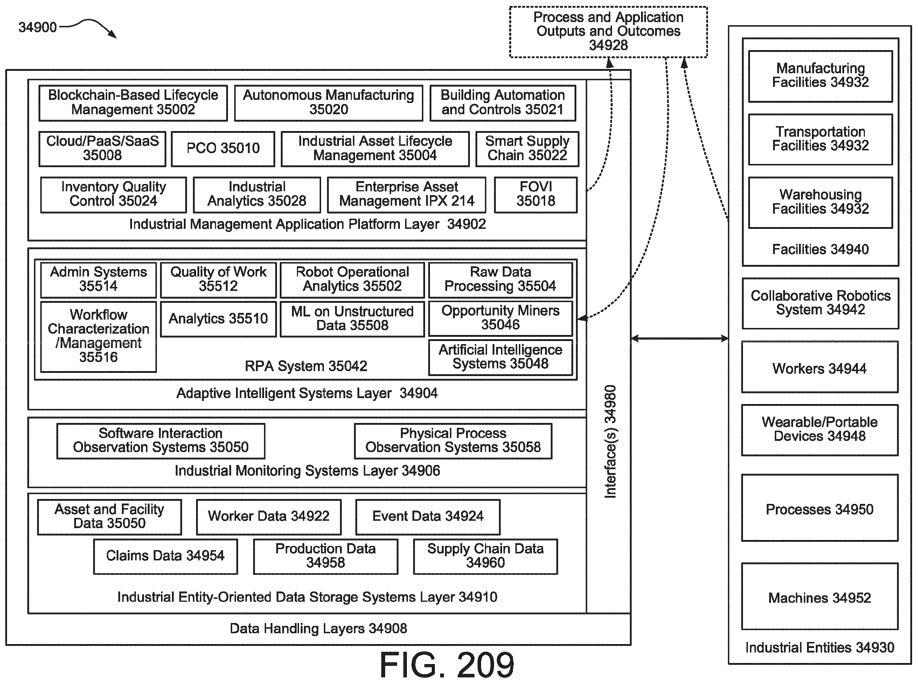

Figure 209 is a schematic diagram showing an example Robotic Process Automation system of the example platform of Figure 203;

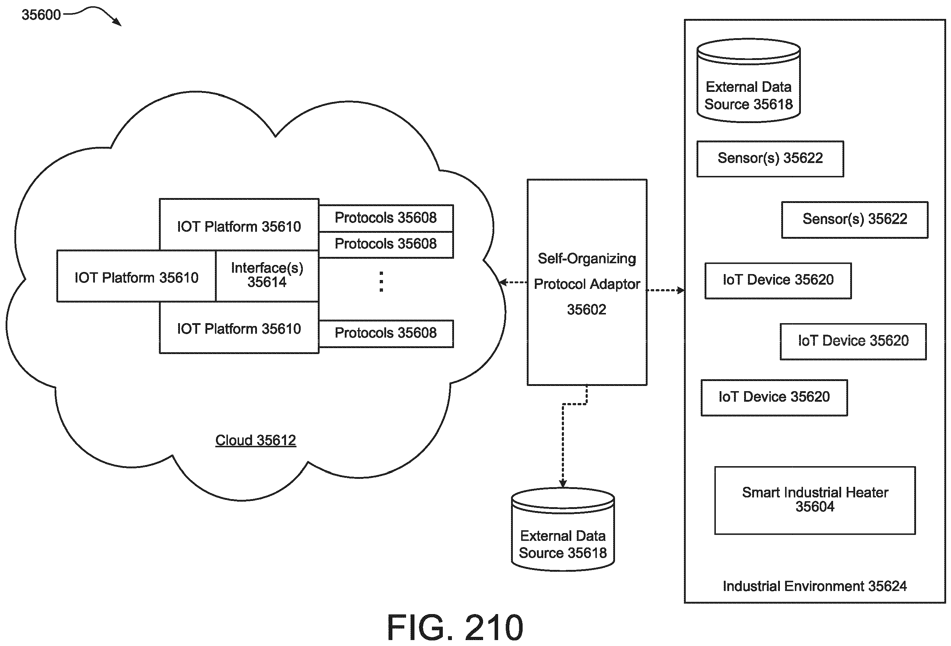

Figure 210 is a schematic diagram of an example system for data processing in an industrial environment that utilizes protocol adaptors according to some aspects of the present disclosure;

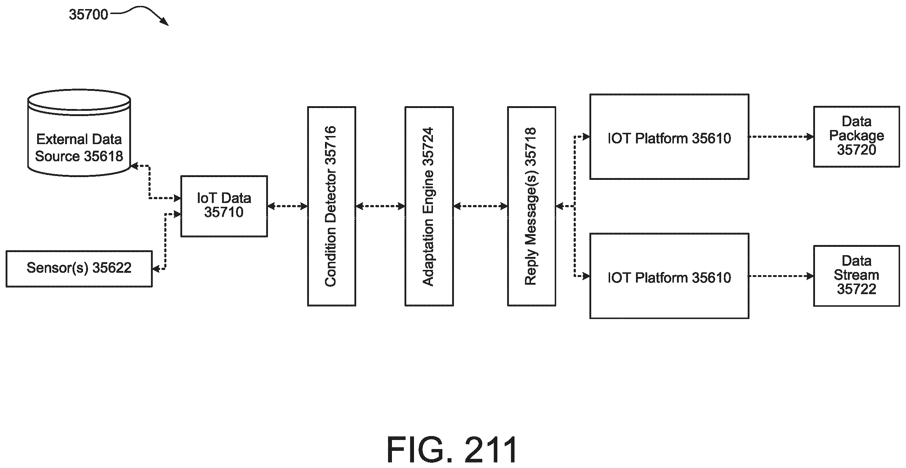

Figure 211 is another schematic diagram illustrating further components and elements of the example system of Figure 210; and

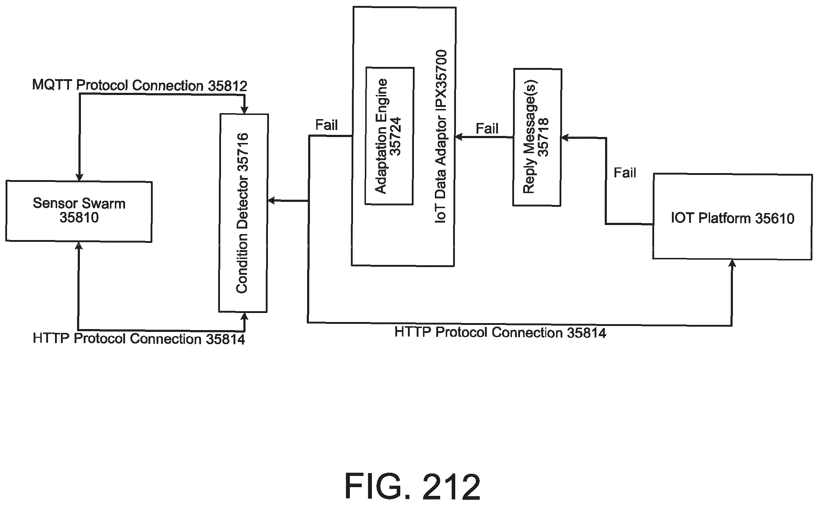

Figure 212 illustrates an example connect attempt of the example system of Figure 210 according to some aspects of the present disclosure.

## DETAILED DESCRIPTION

Detailed embodiments of the present disclosure are disclosed herein; however, it is to be understood that the disclosed embodiments are merely exemplary of the disclosure, which may be embodied in various forms. Therefore, specific structural and functional details disclosed herein are not to be interpreted as limiting, but merely as a basis for the claims and as a representative basis for teaching one skilled in the art to variously employ the present disclosure in virtually any appropriately detailed structure.

Methods and systems described herein for industrial machine sensor data streaming, collection, processing, and storage may be configured to operate with existing data collection, processing, and storage systems while preserving access to existing format/frequency range/resolution compatible data. While the industrial machine sensor data streaming facilities described herein may collect a greater volume of data (e.g., longer duration of data collection) from sensors at a wider range of frequencies and with greater resolution than existing data collection systems, methods and systems may be employed to provide access to data from the stream of data that represents one or more ranges of frequency and/or one or more lines of resolution that are purposely compatible with existing systems. Further, a portion of the streamed data may be identified, extracted, stored, and/or forwarded to existing data processing systems to facilitate operation of existing data processing systems that substantively matches operation of existing data processing systems using existing collection-based data. In this way, a newly deployed system for sensing aspects of industrial machines, such as aspects of moving parts of industrial machines, may facilitate continued use of existing sensed data processing facilities, algorithms, models, pattern recognizers, user interfaces, and the like.

Through identification of existing frequency ranges, formats, and/or resolution, such as by accessing a data structure that defines these aspects of existing data, higher resolution streamed data may be configured to represent a specific frequency, frequency range, format, and/or resolution. This configured streamed data can be stored in a data structure that is compatible with existing sensed data structures so that existing processing systems and facilities can access and process the data substantially as if it were the existing data. One approach to adapting streamed data for compatibility with existing sensed data may include aligning the streamed data with existing data so that portions of the streamed data that align with the existing data can be extracted, stored, and made available for processing with existing data processing methods. Alternatively, data processing methods may be configured to process portions of the streamed data that correspond, such as through alignment, to the existing data, with methods that implement functions substantially similar to the methods used to process existing data, such as methods that process data that contain a particular frequency range or a particular resolution and the like.

Methods used to process existing data may be associated with certain characteristics of sensed data, such as certain frequency ranges, sources of data, and the like. As an example, methods for processing bearing sensing information for a moving part of an industrial machine may be capable of processing data from bearing sensors that fall into a particular frequency range. This method can thusly be at least partially identifiable by these characteristics of the data being processed. Therefore, given a set of conditions, such as moving device being sensed, industrial machine type, frequency of data being sensed, and the like, a data processing system may select an appropriate method. Also, given such a set of conditions, an industrial machine data sensing and processing facility may configure elements, such as data filters, routers, processors, and the like, to handle data meeting the conditions.

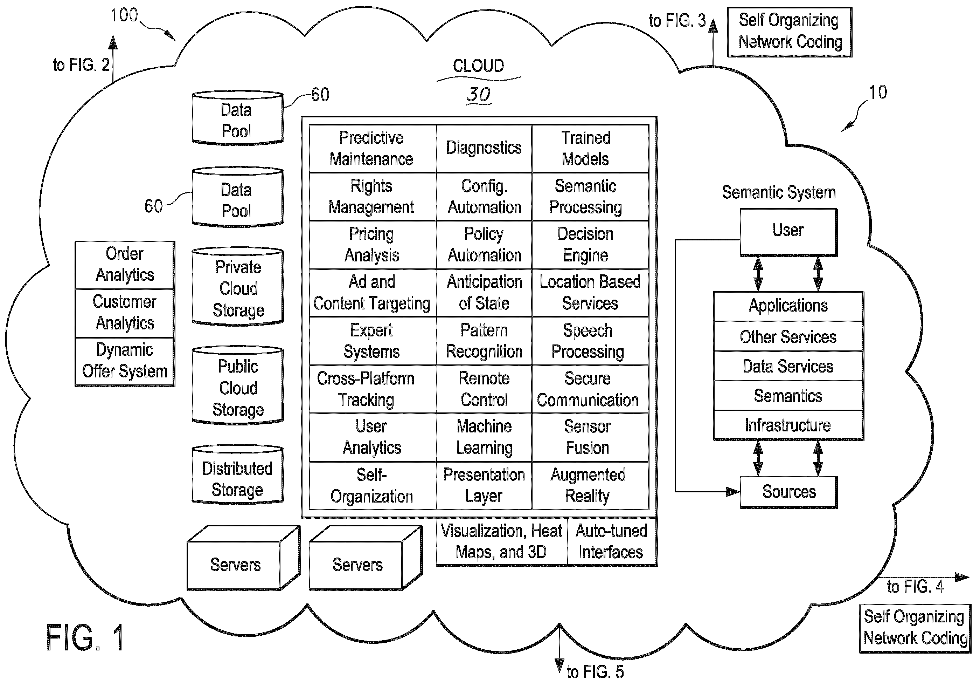

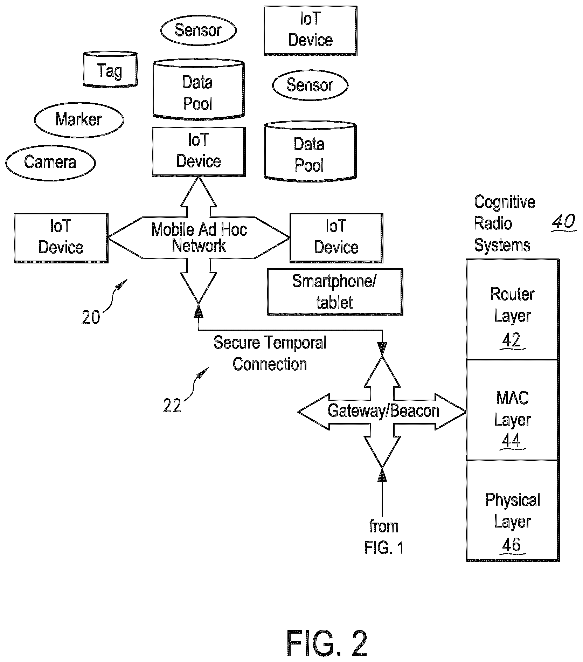

Figures 1 through 5 depict portions of an overall view of an industrial Internet of Things (IoT) data collection, monitoring and control system 10. Figure 2 depicts a mobile ad hoc network ("MANET") 20, which may form a secure, temporal network connection 22 (sometimes connected and sometimes isolated), with a cloud 30 or other remote networking system, so that network functions may occur over the MANET 20 within the environment, without the need for external networks, but at other times information can be sent to and from a central location. This allows the industrial environment to use the benefits of networking and control technologies, while also providing security, such as preventing cyber-attacks. The MANET 20 may use cognitive radio technologies 40, including those that form up an equivalent to the IP protocol, such as router 42, MAC 44, and physical layer technologies 46. In certain embodiments, the system depicted in Figures 1 through 5 provides network-sensitive or network-aware transport of data over the network to and from a data collection device or a heavy industrial machine.

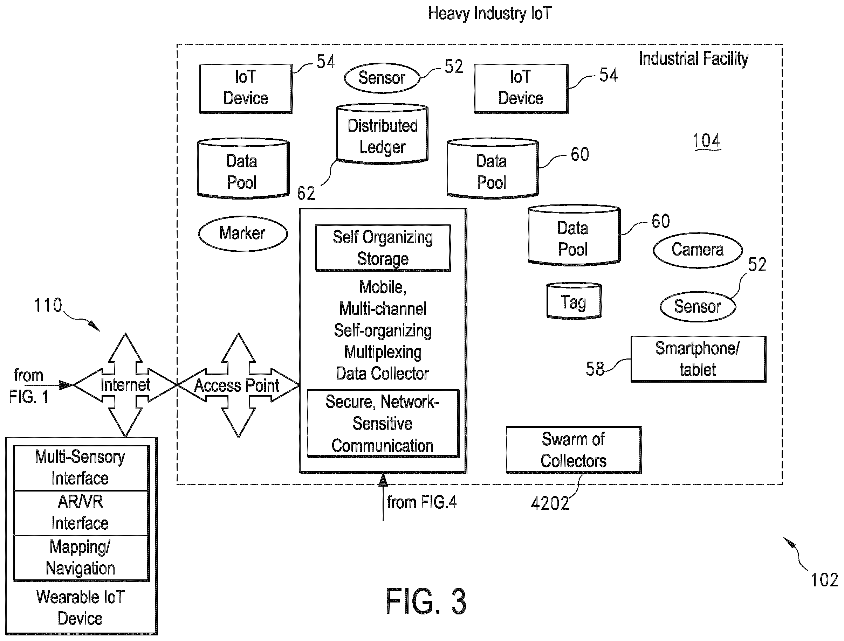

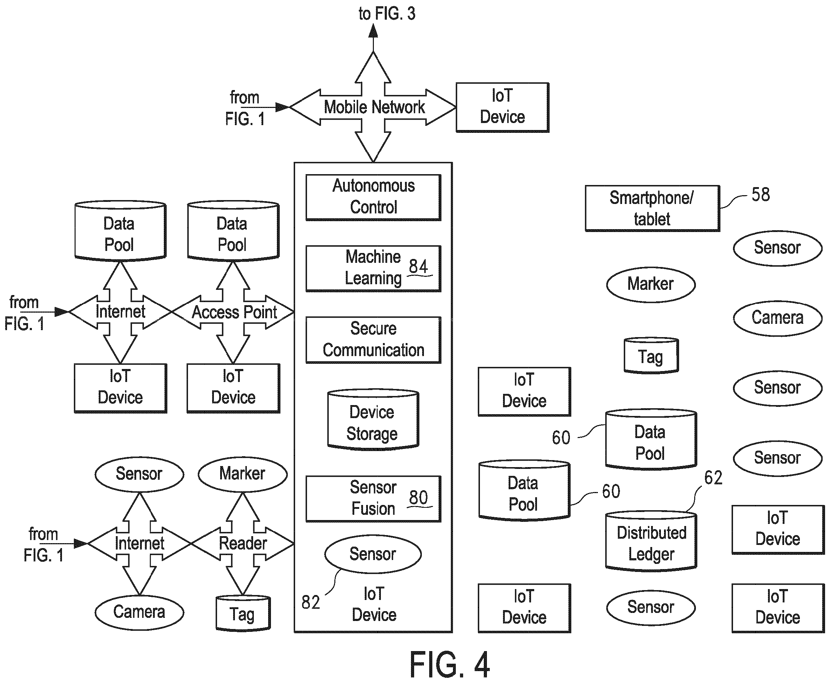

Figures 3-4 depict intelligent data collection technologies deployed locally, at the edge of an IoT deployment, where heavy industrial machines are located. This includes various sensors 52, IoT devices 54, data storage capabilities (e.g., data pools 60, or distributed ledger 62) (including intelligent, self-organizing storage), sensor fusion (including self-organizing sensor fusion), and the like. Interfaces for data collection, including multi-sensory interfaces, tablets, smartphones 58, and the like are shown. Figure 3 also shows data pools 60 that may collect data published by machines or sensors that detect conditions of machines, such as for later consumption by local or remote intelligence. A distributed ledger system 62 may distribute storage across the local storage of various elements of the environment, or more broadly throughout the system. Figure 4 also shows on-device sensor fusion 80, such as for storing on a device data from multiple analog sensors 82, which may be analyzed locally or in the cloud, such as by machine learning 84, including by training a machine based on initial models created by humans that are augmented by providing feedback (such as based on measures of success) when operating the methods and systems disclosed herein.

Figure 1 depicts a server based portion of an industrial IoT system that may be deployed in the cloud or on an enterprise owner's or operator's premises. The server portion includes network coding (including self-organizing network coding and/or automated configuration) that may configure a network coding model based on feedback measures, network conditions, or the like, for highly efficient transport of large amounts of data across the network to and from data collection systems and the cloud. Network coding may provide a wide range of capabilities for intelligence, analytics, remote control, remote operation, remote optimization, various storage configurations and the like, as depicted in Figure 1. The various storage configurations may include distributed ledger storage for supporting transactional data or other elements of the system.

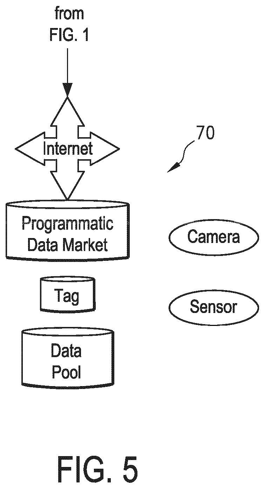

Figure 5 depicts a programmatic data marketplace 70, which may be a self-organizing marketplace, such as for making available data that is collected in industrial environments, such as from data collectors, data pools, distributed ledgers, and other elements disclosed herein. Additional detail on the various components and sub-components of Figures 1 through 5 is provided throughout this disclosure.

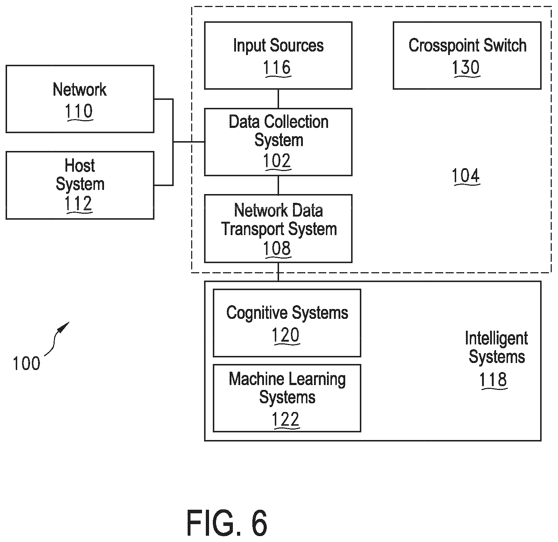

With reference to Figure 6, an embodiment of platform 100 may include a local data collection system 102, which may be disposed in an environment 104, such as an industrial environment similar to that shown in Figure 3, for collecting data from or about the elements of the environment, such as machines, components, systems, sub-systems, ambient conditions, states, workflows, processes, and other elements. The platform 100 may connect to or include portions of the industrial IoT data collection, monitoring and control system 10 depicted in Figures 1-5. The platform 100 may include a network data transport system 108, such as for transporting data to and from the local data collection system 102 over a network 110, such as to a host processing system 112, such as one that is disposed in a cloud computing environment or on the premises of an enterprise, or that consists of distributed components that interact with each other to process data collected by the local data collection system 102. The host processing system 112, referred to for convenience in some cases as the host system 112, may include various systems, components, methods, processes, facilities, and the like for enabling automated, or automation-assisted processing of the data, such as for monitoring one or more environments 104 or networks 110 or for remotely controlling one or more elements in a local environment 104 or in a network 110. The platform 100 may include one or more local autonomous systems, such as for enabling autonomous behavior, such as reflecting artificial, or machine-based intelligence or such as enabling automated action based on the applications of a set of rules or models upon input data from the local data collection system 102 or from one or more input sources 116, which may comprise information feeds and inputs from a wide array of sources, including those in the local environment 104, in a network 110, in the host system 112, or in one or more external systems, databases, or the like. The platform 100 may include one or more intelligent systems 118, which may be disposed in, integrated with, or acting as inputs to one or more components of the platform 100. Details of these and other components of the platform 100 are provided throughout this disclosure.

Intelligent systems 118 may include cognitive systems 120, such as enabling a degree of cognitive behavior as a result of the coordination of processing elements, such as mesh, peer-to-peer, ring, serial, and other architectures, where one or more node elements is coordinated with other node elements to provide collective, coordinated behavior to assist in processing, communication, data collection, or the like. The MANET 20 depicted in Figure 2 may also use cognitive radio technologies, including those that form up an equivalent to the IP protocol, such as router 42, MAC 44, and physical layer technologies 46. In one example, the cognitive system technology stack can include examples disclosed in U.S. Patent Number 8,060,017 to Schlicht et al., issued 15 November 2011.

Intelligent systems may include machine learning systems 122, such as for learning on one or more data sets. The one or more data sets may include information collected using local data collection systems 102 or other information from input sources 116, such as to recognize states, objects, events, patterns, conditions, or the like that may, in turn, be used for processing by the host system 112 as inputs to components of the platform 100 and portions of the industrial IoT data collection, monitoring and control system 10, or the like. Learning may be human-supervised or fully-automated, such as using one or more input sources 116 to provide a data set, along with information about the item to be learned. Machine learning may use one or more models, rules, semantic understandings, workflows, or other structured or semi-structured understanding of the world, such as for automated optimization of control of a system or process based on feedback or feed forward to an operating model for the system or process. One such machine learning technique for semantic and contextual understandings, workflows, or other structured or semi-structured understandings is disclosed in U.S. Patent Number 8,200,775 to Moore, issued 12 June 2012. Machine learning may be used to improve the foregoing, such as by adjusting one or more weights, structures, rules, or the like (such as changing a function within a model) based on feedback (such as regarding the success of a model in a given situation) or based on iteration (such as in a recursive process). Where sufficient understanding of the underlying structure or behavior of a system is not known, insufficient data is not available, or in other cases where preferred for various reasons, machine learning may also be undertaken in the absence of an underlying model; that is, input sources may be weighted, structured, or the like within a machine learning facility without regard to any a priori understanding of structure, and outcomes (such as those based on measures of success at accomplishing various desired objectives) can be serially fed to the machine learning system to allow it to learn how to achieve the targeted objectives. For example, the system may learn to recognize faults, to recognize patterns, to develop models or functions, to develop rules, to optimize performance, to minimize failure rates, to optimize profits, to optimize resource utilization, to optimize flow (such as flow of traffic), or to optimize many other parameters that may be relevant to successful outcomes (such as outcomes in a wide range of environments). Machine learning may use genetic programming techniques, such as promoting or demoting one or more input sources, structures, data types, objects, weights, nodes, links, or other factors based on feedback (such that successful elements emerge over a series of generations). For example, alternative available sensor inputs for a data collection system 102 may be arranged in alternative configurations and permutations, such that the system may, using generic programming techniques over a series of data collection events, determine what permutations provide successful outcomes based on various conditions (such as conditions of components of the platform 100, conditions of the network 110, conditions of a data collection system 102, conditions of an environment 104), or the like. In embodiments, local machine learning may turn on or off one or more sensors in a multi-sensor data collector 102 in permutations over time, while tracking success outcomes such as contributing to success in predicting a failure, contributing to a performance indicator (such as efficiency, effectiveness, return on investment, yield, or the like), contributing to optimization of one or more parameters, identification of a pattern (such as relating to a threat, a failure mode, a success mode, or the like) or the like. For example, a system may learn what sets of sensors should be turned on or off under given conditions to achieve the highest value utilization of a data collector 102. In embodiments, similar techniques may be used to handle optimization of transport of data in the platform 100 (such as in the network 110) by using generic programming or other machine learning techniques to learn to configure network elements (such as configuring network transport paths, configuring network coding types and architectures, configuring network security elements), and the like.

In embodiments, the local data collection system 102 may include a high-performance, multi-sensor data collector having a number of novel features for collection and processing of analog and other sensor data. In embodiments, a local data collection system 102 may be deployed to the industrial facilities depicted in Figure 3. A local data collection system 102 may also be deployed monitor other machines such as the machine 2200. The data collection system 102 may have on-board intelligent systems 118 (such as for learning to optimize the configuration and operation of the data collector, such as configuring permutations and combinations of sensors based on contexts and conditions). In one example, the data collection system 102 includes a crosspoint switch 130 or other analog switch. Automated, intelligent configuration of the local data collection system 102 may be based on a variety of types of information, such as information from various input sources, including those based on available power, power requirements of sensors, the value of the data collected (such as based on feedback information from other elements of the platform 100), the relative value of information (such as values based on the availability of other sources of the same or similar information), power availability (such as for powering sensors), network conditions, ambient conditions, operating states, operating contexts, operating events, and many others.

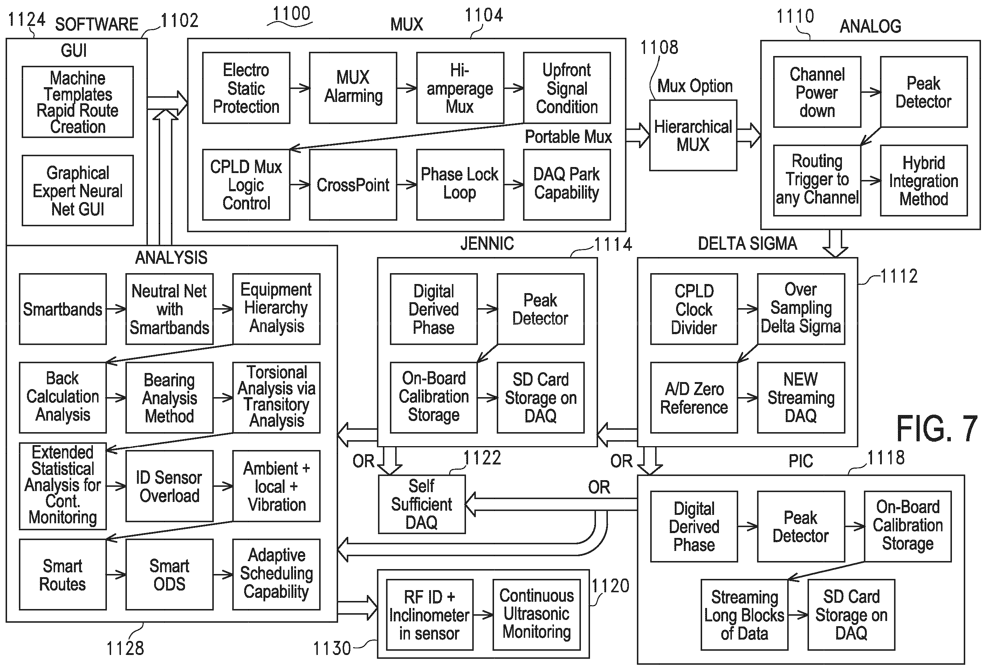

Figure 7 shows elements and sub-components of a data collection and analysis system 1100 for sensor data (such as analog sensor data) collected in industrial environments. As depicted in Figure 7, embodiments of the methods and systems disclosed herein may include hardware that has several different modules starting with the multiplexer ("MUX") main board 1104. In embodiments, there may be a MUX option board 1108. The MUX 114 main board is where the sensors connect to the system. These connections are on top to enable ease of installation. Then there are numerous settings on the underside of this board as well as on the Mux option board 1108, which attaches to the MUX main board 1104 via two headers one at either end of the board. In embodiments, the Mux option board has the male headers, which mesh together with the female header on the main Mux board.

This enables them to be stacked on top of each other taking up less real estate.

In embodiments, the main Mux board and/or the MUX option board then connects to the mother (e.g., with 4 simultaneous channels) and daughter (e.g., with 4 additional channels for 8 total channels) analog boards 1110 via cables where some of the signal conditioning (such as hardware integration) occurs. The signals then move from the analog boards 1110 to an anti-aliasing board (not shown) where some of the potential aliasing is removed. The rest of the aliasing removal is done on the delta sigma board 1112. The delta sigma board 1112 provides more aliasing protection along with other conditioning and digitizing of the signal. Next, the data moves to the Jennic™ board 1114 for more digitizing as well as communication to a computer via USB or Ethernet. In embodiments, the Jennic™ board 1114 may be replaced with a pic board 1118 for more advanced and efficient data collection as well as communication. Once the data moves to the computer software 1102, the computer software 1102 can manipulate the data to show trending, spectra, waveform, statistics, and analytics.

In embodiments, the system is meant to take in all types of data from volts to 4-20 mA signals. In embodiments, open formats of data storage and communication may be used. In some instances, certain portions of the system may be proprietary especially some of research and data associated with the analytics and reporting. In embodiments, smart band analysis is a way to break data down into easily analyzed parts that can be combined with other smart bands to make new more simplified yet sophisticated analytics. In embodiments, this unique information is taken and graphics are used to depict the conditions because picture depictions are more helpful to the user. In embodiments, complicated programs and user interfaces are simplified so that any user can manipulate the data like an expert.

In embodiments, the system in essence, works in a big loop. The system starts in software with a general user interface ("GUI") 1124. In embodiments, rapid route creation may take advantage of hierarchical templates. In embodiments, a GUI is created so any general user can populate the information itself with simple templates. Once the templates are created the user can copy and paste whatever the user needs. In addition, users can develop their own templates for future ease of use and to institutionalize the knowledge. When the user has entered all of the user's information and connected all of the user's sensors, the user can then start the system acquiring data.

Embodiments of the methods and systems disclosed herein may include unique electrostatic protection for trigger and vibration inputs. In many critical industrial environments where large electrostatic forces, which can harm electrical equipment, may build up, for example rotating machinery or low-speed balancing using large belts, proper transducer and trigger input protection is required. In embodiments, a low-cost but efficient method is described for such protection without the need for external supplemental devices.

Typically, vibration data collectors are not designed to handle large input voltages due to the expense and the fact that, more often than not, it is not needed. A need exists for these data collectors to acquire many varied types of RPM data as technology improves and monitoring costs plummet. In embodiments, a method is using the already established OptoMOS™ technology which permits the switching up front of high voltage signals rather than using more conventional reed-relay approaches. Many historic concerns regarding non-linear zero crossing or other non-linear solid-state behaviors have been eliminated with regard to the passing through of weakly buffered analog signals. In addition, in embodiments, printed circuit board routing topologies place all of the individual channel input circuitry as close to the input connector as possible. In embodiments, a unique electrostatic protection for trigger and vibration inputs may be placed upfront on the Mux and DAQ hardware in order to dissipate the built up electric charge as the signal passed from the sensor to the hardware. In embodiments, the Mux and analog board may support high-amperage input using a design topology comprising wider traces and solid state relays for upfront circuitry.

In some systems multiplexers are afterthoughts and the quality of the signal coming from the multiplexer is not considered. As a result of a poor quality multiplexer, the quality of the signal can drop as much as 30 dB or more. Thus, substantial signal quality may be lost using a 24-bit DAQ that has a signal to noise ratio of 110 dB and if the signal to noise ratio drops to 80 dB in the Mux, it may not be much better than a 16-bit system from 20 years ago. In embodiments of this system, an important part at the front of the Mux is upfront signal conditioning on Mux for improved signal-to-noise ratio. Embodiments may perform signal conditioning (such as range/gain control, integration, filtering, etc.) on vibration as well as other signal inputs up front before Mux switching to achieve the highest signal-to-noise ratio.

In embodiments, in addition to providing a better signal, the multiplexer may provide a continuous monitor alarming feature. Truly continuous systems monitor every sensor all the time but tend to be expensive. Typical multiplexer systems only monitor a set number of channels at one time and switch from bank to bank of a larger set of sensors. As a result, the sensors not being currently collected are not being monitored; if a level increases the user may never know. In embodiments, a multiplexer may have a continuous monitor alarming feature by placing circuitry on the multiplexer that can measure input channel levels against known alarm conditions even when the data acquisition ("DAQ") is not monitoring the input. In embodiments, continuous monitoring Mux bypass offers a mechanism whereby channels not being currently sampled by the Mux system may be continuously monitored for significant alarm conditions via a number of trigger conditions using filtered peak-hold circuits or functionally similar that are in turn passed on to the monitoring system in an expedient manner using hardware interrupts or other means. This, in essence, makes the system continuously monitoring, although without the ability to instantly capture data on the problem like a true continuous system. In embodiments, coupling this capability to alarm with adaptive scheduling techniques for continuous monitoring and the continuous monitoring system's software adapting and adjusting the data collection sequence based on statistics, analytics, data alarms and dynamic analysis may allow the system to quickly collect dynamic spectral data on the alarming sensor very soon after the alarm sounds.

Another restriction of typical multiplexers is that they may have a limited number of channels. In embodiments, use of distributed complex programmable logic device ("CPLD") chips with dedicated bus for logic control of multiple Mux and data acquisition sections enables a CPLD to control multiple mux and DAQs so that there is no limit to the number of channels a system can handle. Interfacing to multiple types of predictive maintenance and vibration transducers requires a great deal of switching. This includes AC/DC coupling, 4-20 interfacing, integrated electronic piezoelectric transducer, channel power-down (for conserving op-amp power), single-ended or differential grounding options, and so on. Also required is the control of digital pots for range and gain control, switches for hardware integration, AA filtering and triggering. This logic can be performed by a series of CPLD chips strategically located for the tasks they control. A single giant CPLD requires long circuit routes with a great deal of density at the single giant CPLD. In embodiments, distributed CPLDs not only address these concerns but offer a great deal of flexibility. A bus is created where each CPLD that has a fixed assignment has its own unique device address. In embodiments, multiplexers and DAQs can stack together offering additional input and output channels to the system. For multiple boards (e.g., for multiple Mux boards), jumpers are provided for setting multiple addresses. In another example, three bits permit up to 8 boards that are jumper configurable. In embodiments, a bus protocol is defined such that each CPLD on the bus can either be addressed individually or as a group.

Typical multiplexers may be limited to collecting only sensors in the same bank. For detailed analysis, this may be limiting as there is tremendous value in being able to simultaneously review data from sensors on the same machine. Current systems using conventional fixed bank multiplexers can only compare a limited number of channels (based on the number of channels per bank) that were assigned to a particular group at the time of installation. The only way to provide some flexibility is to either overlap channels or incorporate lots of redundancy in the system both of which can add considerable expense (in some cases an exponential increase in cost versus flexibility). The simplest Mux design selects one of many inputs and routes it into a single output line. A banked design would consist of a group of these simple building blocks, each handling a fixed group of inputs and routing to its respective output. Typically, the inputs are not overlapping so that the input of one Mux grouping cannot be routed into another. Unlike conventional Mux chips which typically switch a fixed group or banks of a fixed selection of channels into a single output (e.g., in groups of 2, 4, 8, etc.), a cross point Mux allows the user to assign any input to any output. Previously, crosspoint multiplexers were used for specialized purposes such as RGB digital video applications and were as a practical matter too noisy for analog applications such as vibration analysis; however more recent advances in the technology now make it feasible. Another advantage of the crosspoint Mux is the ability to disable outputs by putting them into a high impedance state. This is ideal for an output bus so that multiple Mux cards may be stacked, and their output buses joined together without the need for bus switches.

In embodiments, this may be addressed by use of an analog crosspoint switch for collecting variable groups of vibration input channels and providing a matrix circuit so the system may access any set of eight channels from the total number of input sensors.

In embodiments, the ability to control multiple multiplexers with use of distributed CPLD chips with dedicated bus for logic control of multiple Mux and data acquisition sections is enhanced with a hierarchical multiplexer which allows for multiple DAQ to collect data from multiple multiplexers. A hierarchical Mux may allow modularly output of more channels, such as 16, 24 or more to multiple of eight channel card sets. In embodiments, this allows for faster data collection as well as more channels of simultaneous data collection for more complex analysis. In embodiments, the Mux may be configured slightly to make it portable and use data acquisition parking features, which turns SV3X DAQ into a protected system embodiment.

In embodiments, once the signals leave the multiplexer and hierarchical Mux they move to the analog board where there are other enhancements. In embodiments, power saving techniques may be used such as: power-down of analog channels when not in use; powering down of component boards; power-down of analog signal processing op-amps for non-selected channels ; powering down channels on the mother and the daughter analog boards. The ability to power down component boards and other hardware by the low-level firmware for the DAQ system makes high-level application control with respect to power-saving capabilities relatively easy. Explicit control of the hardware is always possible but not required by default. In embodiments, this power saving benefit may be of value to a protected system, especially if it is battery operated or solar powered.

In embodiments, in order to maximize the signal to noise ratio and provide the best data, a peak-detector for auto-scaling routed into a separate A/D will provide the system the highest peak in each set of data so it can rapidly scale the data to that peak. For vibration analysis purposes, the built-in A/D convertors in many microprocessors may be inadequate with regards to number of bits, number of channels or sampling frequency versus not slowing the microprocessor down significantly. Despite these limitations, it is useful to use them for purposes of auto-scaling. In embodiments, a separate A/D may be used that has reduced functionality and is cheaper. For each channel of input, after the signal is buffered (usually with the appropriate coupling: AC or DC) but before it is signal conditioned, the signal is fed directly into the microprocessor or low-cost A/D. Unlike the conditioned signal for which range, gain and filter switches are thrown, no switches are varied. This permits the simultaneous sampling of the auto-scaling data while the input data is signal conditioned, fed into a more robust external A/D, and directed into on-board memory using direct memory access (DMA) methods where memory is accessed without requiring a CPU. This significantly simplifies the auto-scaling process by not having to throw switches and then allow for settling time, which greatly slows down the auto-scaling process. Furthermore, the data may be collected simultaneously, which assures the best signal-to-noise ratio. The reduced number of bits and other features is usually more than adequate for auto-scaling purposes. In embodiments, improved integration using both analog and digital methods create an innovative hybrid integration which also improves or maintains the highest possible signal to noise ratio.

In embodiments, a section of the analog board may allow routing of a trigger channel, either raw or buffered, into other analog channels. This may allow a user to route the trigger to any of the channels for analysis and trouble shooting. Systems may have trigger channels for the purposes of determining relative phase between various input data sets or for acquiring significant data without the needless repetition of unwanted input. In embodiments, digitally controlled relays may be used to switch either the raw or buffered trigger signal into one of the input channels. It may be desirable to examine the quality of the triggering pulse because it may be corrupted for a variety of reasons including inadequate placement of the trigger sensor, wiring issues, faulty setup issues such as a dirty piece of reflective tape if using an optical sensor, and so on. The ability to look at either the raw or buffered signal may offer an excellent diagnostic or debugging vehicle. It also can offer some improved phase analysis capability by making use of the recorded data signal for various signal processing techniques such as variable speed filtering algorithms.

In embodiments, once the signals leave the analog board, the signals move into the delta-sigma board where precise voltage reference for A/D zero reference offers more accurate direct current sensor data. The delta sigma's high speeds also provide for using higher input oversampling for delta-sigma A/D for lower sampling rate outputs to minimize antialiasing filter requirements. Lower oversampling rates can be used for higher sampling rates. For example, a $3^{rd}$ order AA filter set for the lowest sampling requirement for 256 Hz (Fmax of 100 Hz) is then adequate for Fmax ranges of 200 and 500 Hz. Another higher-cutoff AA filter can then be used for Fmax ranges from 1 kHz and higher (with a secondary filter kicking in at 2.56x the highest sampling rate of 128 kHz). In embodiments, a CPLD may be used as a clock-divider for a delta-sigma A/D to achieve lower sampling rates without the need for digital resampling. In embodiments, a high-frequency crystal reference can be divided down to lower frequencies by employing a CPLD as a programmable clock divider. The accuracy of the divided down lower frequencies is even more accurate than the original source relative to their longer time periods. This also minimizes or removes the need for resampling processing by the delta-sigma A/D.

In embodiments, the data then moves from the delta-sigma board to the Jennic™ board where phase relative to input and trigger channels using on-board timers may be digitally derived. In embodiments, the Jennic™ board also has the ability to store calibration data and system maintenance repair history data in an on-board card set. In embodiments, the Jennic™ board will enable acquiring long blocks of data at high-sampling rate as opposed to multiple sets of data taken at different sampling rates so it can stream data and acquire long blocks of data for advanced analysis in the future.

In embodiments, after the signal moves through the Jennic™ board it may then be transmitted to the computer. In embodiments, the computer software will be used to add intelligence to the system starting with an expert system GUI. The GUI will offer a graphical expert system with simplified user interface for defining smart bands and diagnoses which facilitate anyone to develop complex analytics. In embodiments, this user interface may revolve around smart bands, which are a simplified approach to complex yet flexible analytics for the general user. In embodiments, the smart bands may pair with a self-learning neural network for an even more advanced analytical approach. In embodiments, this system may use the machine's hierarchy for additional analytical insight. One critical part of predictive maintenance is the ability to learn from known information during repairs or inspections. In embodiments, graphical approaches for back calculations may improve the smart bands and correlations based on a known fault or problem.

In embodiments, there is a smart route which adapts which sensors it collects simultaneously in order to gain additional correlative intelligence. In embodiments, smart operational data store ("ODS") allows the system to elect to gather data to perform operational deflection shape analysis in order to further examine the machinery condition. In embodiments, adaptive scheduling techniques allow the system to change the scheduled data collected for full spectral analysis across a number (e.g., eight), of correlative channels. In embodiments, the system may provide data to enable extended statistics capabilities for continuous monitoring as well as ambient local vibration for analysis that combines ambient temperature and local temperature and vibration levels changes for identifying machinery issues.

In embodiments, a data acquisition device may be controlled by a personal computer (PC) to implement the desired data acquisition commands. In embodiments, the DAQ box may be self-sufficient. and can acquire, process, analyze and monitor independent of external PC control. Embodiments may include secure digital (SD) card storage. In embodiments, significant additional storage capability may be provided by utilizing an SD card. This may prove critical for monitoring applications where critical data may be stored permanently. Also, if a power failure should occur, the most recent data may be stored despite the fact that it was not off-loaded to another system.

A current trend has been to make DAQ systems as communicative as possible with the outside world usually in the form of networks including wireless. In the past it was common to use a dedicated bus to control a DAQ system with either a microprocessor or microcontroller/microprocessor paired with a PC. In embodiments, a DAQ system may comprise one or more microprocessor/microcontrollers, specialized microcontrollers/microprocessors, or dedicated processors focused primarily on the communication aspects with the outside world. These include USB, Ethernet and wireless with the ability to provide an IP address or addresses in order to host a webpage. All communications with the outside world are then accomplished using a simple text based menu. The usual array of commands (in practice more than a hundred) such as InitializeCard, AcquireData, StopAcquisition, RetrieveCalibration Info, and so on, would be provided.

In embodiments, intense signal processing activities including resampling, weighting, filtering, and spectrum processing may be performed by dedicated processors such as field-programmable gate array ("FPGAs"), digital signal processor ("DSP"), microprocessors, micro-controllers, or a combination thereof. In embodiments, this subsystem may communicate via a specialized hardware bus with the communication processing section. It will be facilitated with dual-port memory, semaphore logic, and so on. This embodiment will not only provide a marked improvement in efficiency but can significantly improve the processing capability, including the streaming of the data as well other high-end analytical techniques. This negates the need for constantly interrupting the main processes which include the control of the signal conditioning circuits, triggering, raw data acquisition using the A/D, directing the A/D output to the appropriate on-board memory and processing that data.

Embodiments may include sensor overload identification. A need exists for monitoring systems to identify when the sensor is overloading. There may be situations involving high-frequency inputs that will saturate a standard 100 mv/g sensor (which is most commonly used in the industry) and having the ability to sense the overload improves data quality for better analysis. A monitoring system may identify when their system is overloading, but in embodiments, the system may look at the voltage of the sensor to determine if the overload is from the sensor, enabling the user to get another sensor better suited to the situation, or gather the data again.

Embodiments may include radio frequency identification ("RFID") and an inclinometer or accelerometer on a sensor so the sensor can indicate what machine/bearing it is attached to and what direction such that the software can automatically store the data without the user input. In embodiments, users could put the system on any machine or machines and the system would automatically set itself up and be ready for data collection in seconds.

Embodiments may include ultrasonic online monitoring by placing ultrasonic sensors inside transformers, motor control centers, breakers and the like and monitoring, via a sound spectrum, continuously looking for patterns that identify arcing, corona and other electrical issues indicating a break down or issue. Embodiments may include providing continuous ultrasonic monitoring of rotating elements and bearings of an energy production facility. In embodiments, an analysis engine may be used in ultrasonic online monitoring as well as identifying other faults by combining the ultrasonic data with other parameters such as vibration, temperature, pressure, heat flux, magnetic fields, electrical fields, currents, voltage, capacitance, inductance, and combinations (e.g., simple ratios) of the same, among many others.

Embodiments of the methods and systems disclosed herein may include use of an analog crosspoint switch for collecting variable groups of vibration input channels. For vibration analysis, it is useful to obtain multiple channels simultaneously from vibration transducers mounted on different parts of a machine (or machines) in multiple directions. By obtaining the readings at the same time, for example, the relative phases of the inputs may be compared for the purpose of diagnosing various mechanical faults. Other types of cross channel analyses such as cross-correlation, transfer functions, Operating Deflection Shape ("ODS") may also be performed.

Embodiments of the methods and systems disclosed herein may include precise voltage reference for A/D zero reference. Some A/D chips provide their own internal zero voltage reference to be used as a mid-scale value for external signal conditioning circuitry to ensure that both the A/D and external op-amps use the same reference. Although this sounds reasonable in principle, there are practical complications. In many cases these references are inherently based on a supply voltage using a resistor-divider. For many current systems, especially those whose power is derived from a PC via USB or similar bus, this provides for an unreliable reference, as the supply voltage will often vary quite significantly with load. This is especially true for delta-sigma A/D chips which necessitate increased signal processing. Although the offsets may drift together with load, a problem arises if one wants to calibrate the readings digitally. It is typical to modify the voltage offset expressed as counts coming from the A/D digitally to compensate for the DC drift. However, for this case, if the proper calibration offset is determined for one set of loading conditions, they will not apply for other conditions. An absolute DC offset expressed in counts will no longer be applicable. As a result, it becomes necessary to calibrate for all loading conditions which becomes complex, unreliable, and ultimately unmanageable. In embodiments, an external voltage reference is used which is simply independent of the supply voltage to use as the zero offset.

In embodiments, the system provides a phase-lock-loop band pass tracking filter method for obtaining slow-speed RPMs and phase for balancing purposes to remotely balance slow speed machinery, such as in paper mills, as well as offering additional analysis from its data. For balancing purposes, it is sometimes necessary to balance at very slow speeds. A typical tracking filter may be constructed based on a phase-lock loop or PLL design; however, stability and speed range are overriding concerns. In embodiments, a number of digitally controlled switches are used for selecting the appropriate RC and damping constants. The switching can be done all automatically after measuring the frequency of the incoming tach signal. Embodiments of the methods and systems disclosed herein may include digital derivation of phase relative to input and trigger channels using on-board timers. In embodiments, digital phase derivation uses digital timers to ascertain an exact delay from a trigger event to the precise start of data acquisition. This delay, or offset, then, is further refined using interpolation methods to obtain an even more precise offset which is then applied to the analytically determined phase of the acquired data such that the phase is "in essence" an absolute phase with precise mechanical meaning useful for among other things, one-shot balancing, alignment analysis, and so on.

Embodiments of the methods and systems disclosed herein may include signal processing firmware/-hardware. In embodiments, long blocks of data may be acquired at high-sampling rate as opposed to multiple sets of data taken at different sampling rates. Typically, in modern route collection for vibration analysis, it is customary to collect data at a fixed sampling rate with a specified data length. The sampling rate and data length may vary from route point to point based on the specific mechanical analysis requirements at hand. For example, a motor may require a relatively low sampling rate with high resolution to distinguish running speed harmonics from line frequency harmonics. The practical trade-off here though is that it takes more collection time to achieve this improved resolution. In contrast, some high-speed compressors or gear sets require much higher sampling rates to measure the amplitudes of relatively higher frequency data although the precise resolution may not be as necessary. Ideally, however, it would be better to collect a very long sample length of data at a very high-sampling rate. When digital acquisition devices were first popularized in the early 1980's, the A/D sampling, digital storage, and computational abilities were not close to what they are today, so compromises were made between the time required for data collection and the desired resolution and accuracy. It was because of this limitation that some analysts in the field even refused to give up their analog tape recording systems, which did not suffer as much from these same digitizing drawbacks. A few hybrid systems were employed that would digitize the play back of the recorded analog data at multiple sampling rates and lengths desired, though these systems were admittedly less automated. The more common approach, as mentioned earlier, is to balance data collection time with analysis capability and digitally acquire the data blocks at multiple sampling rates and sampling lengths and digitally store these blocks separately. In embodiments, a long data length of data can be collected at the highest practical sampling rate (e.g., 102.4 kHz; corresponding to a 40 kHz Fmax) and stored. This long block of data can be acquired in the same amount of time as the shorter length of the lower sampling rates utilized by a priori methods so that there is no effective delay added to the sampling at the measurement point, always a concern in route collection. In embodiments, analog tape recording of data is digitally simulated with such a precision that it can be in effect considered continuous or "analog" for many purposes, including for purposes of embodiments of the present disclosure, except where context indicates otherwise.

Embodiments of the methods and systems disclosed herein may include storage of calibration data and maintenance history on-board card sets. Many data acquisition devices which rely on interfacing to a PC to function store their calibration coefficients on the PC. This is especially true for complex data acquisition devices whose signal paths are many and therefore whose calibration tables can be quite large. In embodiments, calibration coefficients are stored in flash memory which will remember this data or any other significant information for that matter, for all practical purposes, permanently. This information may include nameplate information such as serial numbers of individual components, firmware or software version numbers, maintenance history, and the calibration tables. In embodiments, no matter which computer the box is ultimately connected to, the DAQ box remains calibrated and continues to hold all of this critical information. The PC or external device may poll for this information at any time for implantation or information exchange purposes.

Embodiments of the methods and systems disclosed herein may include rapid route creation taking advantage of hierarchical templates. In the field of vibration monitoring, as well as parametric monitoring in general, it is necessary to establish in a database or functional equivalent the existence of data monitoring points.

These points are associated a variety of attributes including the following categories: transducer attributes, data collection settings, machinery parameters and operating parameters. The transducer attributes would include probe type, probe mounting type and probe mounting direction or axis orientation. Data collection attributes associated with the measurement would involve a sampling rate, data length, integrated electronic piezoelectric probe power and coupling requirements, hardware integration requirements, 4-20 or voltage interfacing, range and gain settings (if applicable), filter requirements, and so on. Machinery parametric requirements relative to the specific point would include such items as operating speed, bearing type, bearing parametric data which for a rolling element bearing includes the pitch diameter, number of balls, inner race, and outer-race diameters. For a tilting pad bearing, this would include the number of pads and so on. For measurement points on a piece of equipment such as a gearbox, needed parameters would include, for example, the number of gear teeth on each of the gears. For induction motors, it would include the number of rotor bars and poles; for compressors, the number of blades and/or vanes; for fans, the number of blades. For belt/pulley systems, the number of belts as well as the relevant belt-passing frequencies may be calculated from the dimensions of the pulleys and pulley center-to-center distance. For measurements near couplings, the coupling type and number of teeth in a geared coupling may be necessary, and so on. Operating parametric data would include operating load, which may be expressed in megawatts, flow (either air or fluid), percentage, horsepower, feet-per-minute, and so on. Operating temperatures both ambient and operational, pressures, humidity, and so on, may also be relevant. As can be seen, the setup information required for an individual measurement point can be quite large. It is also crucial to performing any legitimate analysis of the data. Machinery, equipment, and bearing specific information are essential for identifying fault frequencies as well as anticipating the various kinds of specific faults to be expected. The transducer attributes as well as data collection parameters are vital for properly interpreting the data along with providing limits for the type of analytical techniques suitable. The traditional means of entering this data has been manual and quite tedious, usually at the lowest hierarchical level (for example, at the bearing level with regards to machinery parameters), and at the transducer level for data collection setup information. It cannot be stressed enough, however, the importance of the hierarchical relationships necessary to organize data-both for analytical and interpretive purposes as well as the storage and movement of data. Here, we are focusing primarily on the storage and movement of data. By its nature, the aforementioned setup information is extremely redundant at the level of the lowest hierarchies; however, because of its strong hierarchical nature, it can be stored quite efficiently in that form. In embodiments, hierarchical nature can be utilized when copying data in the form of templates. As an example, hierarchical storage structure suitable for many purposes is defined from general to specific of company, plant or site, unit or process, machine, equipment, shaft element, bearing, and transducer. It is much easier to copy data associated with a particular machine, piece of equipment, shaft element or bearing than it is to copy only at the lowest transducer level. In embodiments, the system not only stores data in this hierarchical fashion, but robustly supports the rapid copying of data using these hierarchical templates. Similarity of elements at specific hierarchical levels lends itself to effective data storage in hierarchical format. For example, so many machines have common elements such as motors, gearboxes, compressors, belts, fans, and so on. More specifically, many motors can be easily classified as induction, DC, fixed or variable speed. Many gearboxes can be grouped into commonly occurring groupings such as input/output, input pinion/intermediate pinion/output pinion, 4-posters, and so on. Within a plant or company, there are many similar types of equipment purchased and standardized on for both cost and maintenance reasons. This results in an enormous overlapping of similar types of equipment and, as a result, offers a great opportunity for taking advantage of a hierarchical template approach.

Embodiments of the methods and systems disclosed herein may include smart bands. Smart bands refer to any processed signal characteristics derived from any dynamic input or group of inputs for the purposes of analyzing the data and achieving the correct diagnoses. Furthermore, smart bands may even include mini or relatively simple diagnoses for the purposes of achieving a more robust and complex one. Historically, in the field of mechanical vibration analysis, Alarm Bands have been used to define spectral frequency bands of interest for the purposes of analyzing and/or trending significant vibration patterns. The Alarm Band typically consists of a spectral (amplitude plotted against frequency) region defined between a low and high frequency border. The amplitude between these borders is summed in the same manner for which an overall amplitude is calculated. A Smart Band is more flexible in that it not only refers to a specific frequency band but can also refer to a group of spectral peaks such as the harmonics of a single peak, a true-peak level or crest factor derived from a time waveform, an overall derived from a vibration envelope spectrum or other specialized signal analysis technique or a logical combination (AND, OR, XOR, etc.) of these signal attributes. In addition, a myriad assortment of other parametric data, including system load, motor voltage and phase information, bearing temperature, flow rates, and the like, can likewise be used as the basis for forming additional smart bands. In embodiments, Smart Band symptoms may be used as building blocks for an expert system whose engine would utilize these inputs to derive diagnoses. Some of these mini-diagnoses may then in turn be used as Smart-Band symptoms (smart bands can include even diagnoses) for more generalized diagnoses.

Embodiments of the methods and systems disclosed herein may include a neural net expert system using smart bands. Typical vibration analysis engines are rule-based (i.e., they use a list of expert rules which, when met, trigger specific diagnoses). In contrast, a neural approach utilizes the weighted triggering of multiple input stimuli into smaller analytical engines or neurons which in turn feed a simplified weighted output to other neurons. The output of these neurons can be also classified as smart bands which in turn feed other neurons. This produces a more layered approach to expert diagnosing as opposed to the one-shot approach of a rule-based system. In embodiments, the expert system utilizes this neural approach using smart bands; however, it does not preclude rule-based diagnoses being reclassified as smart bands as further stimuli to be utilized by the expert system. From this point-of-view, it can be overviewed as a hybrid approach, although at the highest level it is essentially neural.

Embodiments of the methods and systems disclosed herein may include use of database hierarchy in analysis smart band symptoms and diagnoses may be assigned to various hierarchical database levels. For example, a smart band may be called "Looseness" at the bearing level, trigger "Looseness" at the equipment level, and trigger "Looseness" at the machine level. Another example would be having a smart band diagnosis called "Horizontal Plane Phase Flip" across a coupling and generate a smart band diagnosis of "Vertical Coupling Misalignment" at the machine level.

Embodiments of the methods and systems disclosed herein may include expert system GUIs. In embodiments, the system undertakes a graphical approach to defining smart bands and diagnoses for the expert system. The entry of symptoms, rules, or more generally smart bands for creating a particular machine diagnosis, may be tedious and time consuming. One means of making the process more expedient and efficient is to provide a graphical means by use of wiring. The proposed graphical interface consists of four major components: a symptom parts bin, diagnoses bin, tools bin, and graphical wiring area ("GWA"). In embodiments, a symptom parts bin includes various spectral, waveform, envelope and any type of signal processing characteristic or grouping of characteristics such as a spectral peak, spectral harmonic, waveform true-peak, waveform crest-factor, spectral alarm band, and so on. Each part may be assigned additional properties. For example, a spectral peak part may be assigned a frequency or order (multiple) of running speed. Some parts may be predefined or user defined such as a 1x, 2x, 3x running speed, 1x, 2x, 3x gear mesh, 1x, 2x, 3x blade pass, number of motor rotor bars x running speed, and so on.

In embodiments, the diagnoses bin includes various pre-defined as well as user-defined diagnoses such as misalignment, imbalance, looseness, bearing faults, and so on. Like parts, diagnoses may also be used as parts for the purposes of building more complex diagnoses. In embodiments, the tools bin includes logical operations such as AND, OR, XOR, etc. or other ways of combining the various parts listed above such as Find Max, Find Min, Interpolate, Average, other Statistical Operations, etc. In embodiments, a graphical wiring area includes parts from the parts bin or diagnoses from the diagnoses bin and may be combined using tools to create diagnoses. The various parts, tools and diagnoses will be represented with icons which are simply graphically wired together in the desired manner.

Embodiments of the methods and systems disclosed herein may include a graphical approach for back-calculation definition. In embodiments, the expert system also provides the opportunity for the system to learn. If one already knows that a unique set of stimuli or smart bands corresponds to a specific fault or diagnosis, then it is possible to back-calculate a set of coefficients that when applied to a future set of similar stimuli would arrive at the same diagnosis. In embodiments, if there are multiple sets of data, a best-fit approach may be used. Unlike the smart band GUI, this embodiment will self-generate a wiring diagram. In embodiments, the user may tailor the back-propagation approach settings and use a database browser to match specific sets of data with the desired diagnoses. In embodiments, the desired diagnoses may be created or custom tailored with a smart band GUI. In embodiments, after that, a user may press the GENERATE button and a dynamic wiring of the symptom-to-diagnosis may appear on the screen as it works through the algorithms to achieve the best fit. In embodiments, when complete, a variety of statistics are presented which detail how well the mapping process proceeded. In some cases, no mapping may be achieved if, for example, the input data was all zero or the wrong data (mistakenly assigned) and so on. Embodiments of the methods and systems disclosed herein may include bearing analysis methods. In embodiments, bearing analysis methods may be used in conjunction with a computer aided design ("CAD"), predictive deconvolution, minimum variance distortionless response ("MVDR") and spectrum sum-of-harmonics.

In recent years, there has been a strong drive to save power which has resulted in an influx of variable frequency drives and variable speed machinery. In embodiments, a bearing analysis method is provided. In embodiments, torsional vibration detection and analysis is provided utilizing transitory signal analysis to provide an advanced torsional vibration analysis for a more comprehensive way to diagnose machinery where torsional forces are relevant (such as machinery with rotating components). Due primarily to the decrease in cost of motor speed control systems, as well as the increased cost and consciousness of energy-usage, it has become more economically justifiable to take advantage of the potentially vast energy savings of load control. Unfortunately, one frequently overlooked design aspect of this issue is that of vibration. When a machine is designed to run at only one speed, it is far easier to design the physical structure accordingly so as to avoid mechanical resonances both structural and torsional, each of which can dramatically shorten the mechanical health of a machine. This would include such structural characteristics as the types of materials to use, their weight, stiffening member requirements and placement, bearing types, bearing location, base support constraints, etc. Even with machines running at one speed, designing a structure so as to minimize vibration can prove a daunting task, potentially requiring computer modeling, finite-element analysis, and field testing. By throwing variable speeds into the mix, in many cases, it becomes impossible to design for all desirable speeds. The problem then becomes one of minimization, e.g., by speed avoidance. This is why many modern motor controllers are typically programmed to skip or quickly pass through specific speed ranges or bands. Embodiments may include identifying speed ranges in a vibration monitoring system. Non-torsional, structural resonances are typically fairly easy to detect using conventional vibration analysis techniques. However, this is not the case for torsion. One special area of current interest is the increased incidence of torsional resonance problems, apparently due to the increased torsional stresses of speed change as well as the operation of equipment at torsional resonance speeds. Unlike non-torsional structural resonances which generally manifest their effect with dramatically increased casing or external vibration, torsional resonances generally show no such effect. In the case of a shaft torsional resonance, the twisting motion induced by the resonance may only be discernible by looking for speed and/or phase changes. The current standard methodology for analyzing torsional vibration involves the use of specialized instrumentation. Methods and systems disclosed herein allow analysis of torsional vibration without such specialized instrumentation. This may consist of shutting the machine down and employing the use of strain gauges and/or other special fixturing such as speed encoder plates and/or gears. Friction wheels are another alternative, but they typically require manual implementation and a specialized analyst. In general, these techniques can be prohibitively expensive and/or inconvenient. An increasing prevalence of continuous vibration monitoring systems due to decreasing costs and increasing convenience (e.g., remote access) exists. In embodiments, there is an ability to discern torsional speed and/or phase variations with just the vibration signal. In embodiments, transient analysis techniques may be utilized to distinguish torsionally induced vibrations from mere speed changes due to process control. In embodiments, factors for discernment might focus on one or more of the following aspects: the rate of speed change due to variable speed motor control would be relatively slow, sustained and deliberate; torsional speed changes would tend to be short, impulsive and not sustained; torsional speed changes would tend to be oscillatory, most likely decaying exponentially, process speed changes would not; and smaller speed changes associated with torsion relative to the shaft's rotational speed which suggest that monitoring phase behavior would show the quick or transient speed bursts in contrast to the slow phase changes historically associated with ramping a machine's speed up or down (as typified with Bode or Nyquist plots).

Embodiments of the methods and systems disclosed herein may include improved integration using both analog and digital methods. When a signal is digitally integrated using software, essentially the spectral low-end frequency data has its amplitude multiplied by a function which quickly blows up as it approaches zero and creates what is known in the industry as a "ski-slope" effect. The amplitude of the ski-slope is essentially the noise floor of the instrument. The simple remedy for this is the traditional hardware integrator, which can perform at signal-to-noise ratios much greater than that of an already digitized signal. It can also limit the amplification factor to a reasonable level so that multiplication by very large numbers is essentially prohibited. However, at high frequencies where the frequency becomes large, the original amplitude which may be well above the noise floor is multiplied by a very small number (1/f) that plunges it well below the noise floor. The hardware integrator has a fixed noise floor that although low floor does not scale down with the now lower amplitude high-frequency data. In contrast, the same digital multiplication of a digitized high-frequency signal also scales down the noise floor proportionally. In embodiments, hardware integration may be used below the point of unity gain where (at a value usually determined by units and/or desired signal to noise ratio based on gain) and software integration may be used above the value of unity gain to produce an ideal result. In embodiments, this integration is performed in the frequency domain. In embodiments, the resulting hybrid data can then be transformed back into a waveform which should be far superior in signal-to-noise ratio when compared to either hardware integrated or software integrated data. In embodiments, the strengths of hardware integration are used in conjunction with those of digital software integration to achieve the maximum signal-to-noise ratio. In embodiments, the first order gradual hardware integrator high pass filter along with curve fitting allow some relatively low frequency data to get through while reducing or eliminating the noise, allowing very useful analytical data that steep filters kill to be salvaged.

Embodiments of the methods and systems disclosed herein may include adaptive scheduling techniques for continuous monitoring. Continuous monitoring is often performed with an up-front Mux whose purpose it is to select a few channels of data among many to feed the hardware signal processing, A/D, and processing components of a DAQ system. This is done primarily out of practical cost considerations. The tradeoff is that all of the points are not monitored continuously (although they may be monitored to a lesser extent via alternative hardware methods). In embodiments, multiple scheduling levels are provided. In embodiments, at the lowest level, which is continuous for the most part, all of the measurement points will be cycled through in round-robin fashion. For example, if it takes 30 seconds to acquire and process a measurement point and there are 30 points, then each point is serviced once every 15 minutes; however, if a point should alarm by whatever criteria the user selects, its priority level can be increased so that it is serviced more often. As there can be multiple grades of severity for each alarm, so can there me multiple levels of priority with regards to monitoring. In embodiments, more severe alarms will be monitored more frequently. In embodiments, a number of additional high-level signal processing techniques can be applied at less frequent intervals. Embodiments may take advantage of the increased processing power of a PC and the PC can temporarily suspend the round-robin route collection (with its multiple tiers of collection) process and stream the required amount of data for a point of its choosing. Embodiments may include various advanced processing techniques such as envelope processing, wavelet analysis, as well as many other signal processing techniques. In embodiments, after acquisition of this data, the DAQ card set will continue with its route at the point it was interrupted. In embodiments, various PC scheduled data acquisitions will follow their own schedules which will be less frequency than the DAQ card route. They may be set up hourly, daily, by number of route cycles (for example, once every 10 cycles) and also increased scheduling-wise based on their alarm severity priority or type of measurement (e.g., motors may be monitored differently than fans).

Embodiments of the methods and systems disclosed herein may include data acquisition parking features. In embodiments, a data acquisition box used for route collection, real time analysis and in general as an acquisition instrument can be detached from its PC (tablet or otherwise) and powered by an external power supply or suitable battery. In embodiments, the data collector still retains continuous monitoring capability and its on-board firmware can implement dedicated monitoring functions for an extended period of time or can be controlled remotely for further analysis. Embodiments of the methods and systems disclosed herein may include extended statistical capabilities for continuous monitoring.

Embodiments of the methods and systems disclosed herein may include ambient sensing plus local sensing plus vibration for analysis. In embodiments, ambient environmental temperature and pressure, sensed temperature and pressure may be combined with long/medium term vibration analysis for prediction of any of a range of conditions or characteristics. Variants may add infrared sensing, infrared thermography, ultrasound, and many other types of sensors and input types in combination with vibration or with each other. Embodiments of the methods and systems disclosed herein may include a smart route. In embodiments, the continuous monitoring system's software will adapt/adjust the data collection sequence based on statistics, analytics, data alarms and dynamic analysis. Typically, the route is set based on the channels the sensors are attached to. In embodiments, with the crosspoint switch, the Mux can combine any input Mux channels to the (e.g., eight) output channels. In embodiments, as channels go into alarm or the system identifies key deviations, it will pause the normal route set in the software to gather specific simultaneous data, from the channels sharing key statistical changes, for more advanced analysis. Embodiments include conducting a smart ODS or smart transfer function.

Embodiments of the methods and systems disclosed herein may include smart ODS and one or more transfer functions. In embodiments, due to a system's multiplexer and crosspoint switch, an ODS, a transfer function, or other special tests on all the vibration sensors attached to a machine/structure can be performed and show exactly how the machine's points are moving in relationship to each other. In embodiments, 40-50 kHz and longer data lengths (e.g., at least one minute) may be streamed, which may reveal different information than what a normal ODS or transfer function will show. In embodiments, the system will be able to determine, based on the data/statistics/analytics to use, the smart route feature that breaks from the standard route and conducts an ODS across a machine, structure or multiple machines and structures that might show a correlation because the conditions/data directs it. In embodiments, for the transfer functions there may be an impact hammer used on one channel and then compared against other vibration sensors on the machine. In embodiments, the system may use the condition changes such as load, speed, temperature or other changes in the machine or system to conduct the transfer function. In embodiments, different transfer functions may be compared to each other over time. In embodiments, difference transfer functions may be strung together like a movie that may show how the machinery fault changes, such as a bearing that could show how it moves through the four stages of bearing failure and so on. Embodiments of the methods and systems disclosed herein may include a hierarchical Mux.

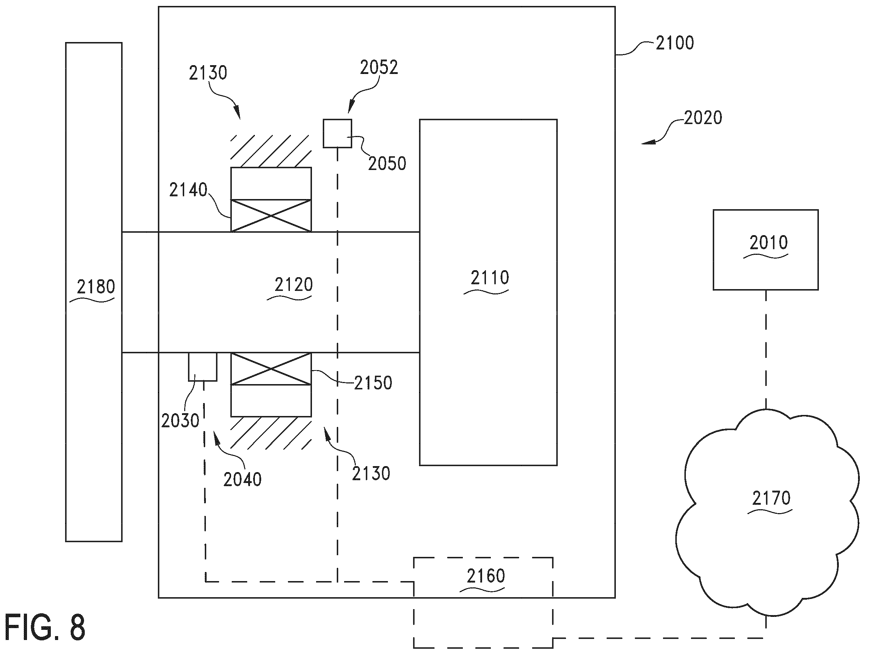

With reference to Figure 8, the present disclosure generally includes digitally collecting or streaming waveform data 2010 from a machine 2020 whose operational speed can vary from relatively slow rotational or oscillational speeds to much higher speeds in different situations. The waveform data 2010, at least on one machine, may include data from a single axis sensor 2030 mounted at an unchanging reference location 2040 and from a three-axis sensor 2050 mounted at changing locations (or located at multiple locations), including location 2052. In embodiments, the waveform data 2010 can be vibration data obtained simultaneously from each sensor 2030, 2050 in a gap-free format for a duration of multiple minutes with maximum resolvable frequencies sufficiently large to capture periodic and transient impact events. By way of this example, the waveform data 2010 can include vibration data that can be used to create an operational deflecting shape. It can also be used, as needed, to diagnose vibrations from which a machine repair solution can be prescribed.

In embodiments, the machine 2020 can further include a housing 2100 that can contain a drive motor 2110 that can drive a shaft 2120. The shaft 2120 can be supported for rotation or oscillation by a set of bearings 2130, such as including a first bearing 2140 and a second bearing 2150. A data collection module 2160 can connect to (or be resident on) the machine 2020. In one example, the data collection module 2160 can be located and accessible through a cloud network facility 2170, can collect the waveform data 2010 from the machine 2020, and deliver the waveform data 2010 to a remote location. A working end 2180 of the drive shaft 2120 of the machine 2020 can drive a windmill, a fan, a pump, a drill, a gear system, a drive system, or other working element, as the techniques described herein can apply to a wide range of machines, equipment, tools, or the like that include rotating or oscillating elements. In other instances, a generator can be substituted for the motor 2110, and the working end of the drive shaft 2120 can direct rotational energy to the generator to generate power, rather than consume it.

In embodiments, the waveform data 2010 can be obtained using a predetermined route format based on the layout of the machine 2020. The waveform data 2010 may include data from the single axis sensor 2030 and the three-axis sensor 2050. The single-axis sensor 2030 can serve as a reference probe with its one channel of data and can be fixed at the unchanging location 2040 on the machine under survey. The three-axis sensor 2050 can serve as a tri-axial probe (e.g., three orthogonal axes) with its three channels of data and can be moved along a predetermined diagnostic route format from one test point to the next test point. In one example, both sensors 2030, 2050 can be mounted manually to the machine 2020 and can connect to a separate portable computer in certain service examples. The reference probe can remain at one location while the user can move the tri-axial vibration probe along the predetermined route, such as from bearing-to-bearing on a machine. In this example, the user is instructed to locate the sensors at the predetermined locations to complete the survey (or portion thereof) of the machine.

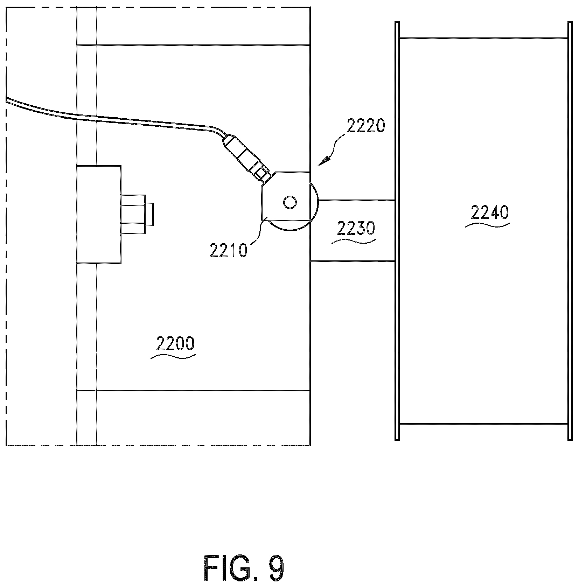

With reference to Figure 9, a portion of an exemplary machine 2200 is shown having a tri-axial sensor 2210 mounted to a location 2220 associated with a motor bearing of the machine 2200 with an output shaft 2230 and output member 2240 in accordance with the present disclosure.

In further examples, the sensors and data acquisition modules and equipment can be integral to, or resident on, the rotating machine. By way of these examples, the machine can contain many single axis sensors and many tri-axial sensors at predetermined locations. The sensors can be originally installed equipment and provided by the original equipment manufacturer or installed at a different time in a retrofit application. The data collection module 2160, or the like, can select and use one single axis sensor and obtain data from it exclusively during the collection of waveform data 2010 while moving to each of the tri-axial sensors. The data collection module 2160 can be resident on the machine 2020 and/or connect via the cloud network facility 2170.

With reference to Figure 8, the various embodiments include collecting the waveform data 2010 by digitally recording locally, or streaming over, the cloud network facility 2170. The waveform data 2010 can be collected so as to be gap-free with no interruptions and, in some respects, can be similar to an analog recording of waveform data. The waveform data 2010 from all of the channels can be collected for one to two minutes depending on the rotating or oscillating speed of the machine being monitored. In embodiments, the data sampling rate can be at a relatively high-sampling rate relative to the operating frequency of the machine 2020.

In embodiments, a second reference sensor can be used, and a fifth channel of data can be collected. As such, the single-axis sensor can be the first channel and tri-axial vibration can occupy the second, the third, and the fourth data channels. This second reference sensor, like the first, can be a single axis sensor, such as an accelerometer. In embodiments, the second reference sensor, like the first reference sensor, can remain in the same location on the machine for the entire vibration survey on that machine. The location of the first reference sensor (i.e., the single axis sensor) may be different than the location of the second reference sensors (i.e., another single axis sensor). In certain examples, the second reference sensor can be used when the machine has two shafts with different operating speeds, with the two reference sensors being located on the two different shafts. In accordance with this example, further single-axis reference sensors can be employed at additional but different unchanging locations associated with the rotating machine.

In embodiments, the waveform data can be transmitted electronically in a gap-free free format at a significantly high rate of sampling for a relatively longer period of time. In one example, the period of time is 60 seconds to 120 seconds. In another example, the rate of sampling is 100 kHz with a maximum resolvable frequency (Fmax) of 40 kHz. It will be appreciated in light of this disclosure that the waveform data can be shown to approximate more closely some of the wealth of data available from previous instances of analog recording of waveform data.

In embodiments, sampling, band selection, and filtering techniques can permit one or more portions of a long stream of data (i.e., one to two minutes in duration) to be under sampled or over sampled to realize varying effective sampling rates. To this end, interpolation and decimation can be used to further realize varying effective sampling rates. For example, oversampling may be applied to frequency bands that are proximal to rotational or oscillational operating speeds of the sampled machine, or to harmonics thereof, as vibration effects may tend to be more pronounced at those frequencies across the operating range of the machine. In embodiments, the digitally-sampled data set can be decimated to produce a lower sampling rate. It will be appreciated in light of the disclosure that decimate in this context can be the opposite of interpolate. In embodiments, decimating the data set can include first applying a low-pass filter to the digitally-sampled data set and then undersampling the data set.

In one example, a sample waveform at 100 Hz can be undersampled at every tenth point of the digital waveform to produce an effective sampling rate of 10 Hz, but the remaining nine points of that portion of the waveform are effectively discarded and not included in the modeling of the sample waveform. Moreover, this type of bare undersampling can create ghost frequencies due to the undersampling rate (i.e., 10 Hz) relative to the 100 Hz sample waveform.

Most hardware for analog-to-digital conversions uses a sample-and-hold circuit that can charge up a capacitor for a given amount of time such that an average value of the waveform is determined over a specific change in time. It will be appreciated in light of the disclosure that the value of the waveform over the specific change in time is not linear but more similar to a cardinal sinusoidal ("sinc") function; therefore, it can be shown that more emphasis can be placed on the waveform data at the center of the sampling interval with exponential decay of the cardinal sinusoidal signal occurring from its center.

By way of the above example, the sample waveform at 100 Hz can be hardware-sampled at 10 Hz and therefore each sampling point is averaged over 100 milliseconds (e.g., a signal sampled at 100 Hz can have each point averaged over 10 milliseconds). In contrast to the effective discarding of nine out of the ten data points of the sampled waveform as discussed above, the present disclosure can include weighing adjacent data. The adjacent data can refer to the sample points that were previously discarded and the one remaining point that was retained. In one example, a low pass filter can average the adjacent sample data linearly, i.e., determining the sum of every ten points and then dividing that sum by ten. In a further example, the adjacent data can be weighted with a sinc function. The process of weighting the original waveform with the sinc function can be referred to as an impulse function, or can be referred to in the time domain as a convolution.

The present disclosure can be applicable to not only digitizing a waveform signal based on a detected voltage, but can also be applicable to digitizing waveform signals based on current waveforms, vibration waveforms, and image processing signals including video signal rasterization. In one example, the resizing of a window on a computer screen can be decimated, albeit in at least two directions. In these further examples, it will be appreciated that undersampling by itself can be shown to be insufficient. To that end, oversampling or upsampling by itself can similarly be shown to be insufficient, such that interpolation can be used like decimation but in lieu of only undersampling by itself.

It will be appreciated in light of the disclosure that interpolation in this context can refer to first applying a low pass filter to the digitally-sampled waveform data and then upsampling the waveform data. It will be appreciated in light of the disclosure that real-world examples can often require the use of use non-integer factors for decimation or interpolation, or both. To that end, the present disclosure includes interpolating and decimating sequentially in order to realize a non-integer factor rate for interpolating and decimating. In one example, interpolating and decimating sequentially can define applying a low-pass filter to the sample waveform, then interpolating the waveform after the low-pass filter, and then decimating the waveform after the interpolation. In embodiments, the vibration data can be looped to purposely emulate conventional tape recorder loops, with digital filtering techniques used with the effective splice to facilitate longer analyses. It will be appreciated in light of the disclosure that the above techniques do not preclude waveform, spectrum, and other types of analyses to be processed and displayed with a GUI of the user at the time of collection. It will be appreciated in light of the disclosure that newer systems can permit this functionality to be performed in parallel to the high-performance collection of the raw waveform data.

With respect to time of collection issues, it will be appreciated that older systems using the compromised approach of improving data resolution, by collecting at different sampling rates and data lengths, do not in fact save as much time as expected. To that end, every time the data acquisition hardware is stopped and started, latency issues can be created, especially when there is hardware auto-scaling performed. The same can be true with respect to data retrieval of the route information (i.e., test locations) that is often in a database format and can be exceedingly slow. The storage of the raw data in bursts to disk (whether solid state or otherwise) can also be undesirably slow.

In contrast, the many embodiments include digitally streaming the waveform data 2010, as disclosed herein, and also enjoying the benefit of needing to load the route parameter information while setting the data acquisition hardware only once. Because the waveform data 2010 is streamed to only one file, there is no need to open and close files, or switch between loading and writing operations with the storage medium. It can be shown that the collection and storage of the waveform data 2010, as described herein, can be shown to produce relatively more meaningful data in significantly less time than the traditional batch data acquisition approach. An example of this includes an electric motor about which waveform data can be collected with a data length of 4K points (i.e., 4,096) for sufficiently high resolution in order to, among other things, distinguish electrical sideband frequencies. For fans or blowers, a reduced resolution of 1K (i.e., 1,024) can be used. In certain instances, 1K can be the minimum waveform data length requirement. The sampling rate can be 1,280 Hz and that equates to an Fmax of 500 Hz. It will be appreciated in light of the disclosure that oversampling by an industry standard factor of 2.56 can satisfy the necessary two-times (2x) oversampling for the Nyquist Criterion with some additional leeway that can accommodate anti-aliasing filter-rolloff. The time to acquire this waveform data would be 1,024 points at 1,280 hertz, which are 800 milliseconds.

To improve accuracy, the waveform data can be averaged. Eight averages can be used with, for example, fifty percent overlap. This would extend the time from 800 milliseconds to 3.6 seconds, which is equal to 800 msec x 8 averages x 0.5 (overlap ratio) + 0.5 x 800 msec (non-overlapped head and tail ends). After collection at Fmax = 500 Hz waveform data, a higher sampling rate can be used. In one example, ten times (10x) the previous sampling rate can be used and Fmax = 10 kHz. By way of this example, eight averages can be used with fifty percent (50%) overlap to collect waveform data at this higher rate that can amount to a collection time of 360 msec or 0.36 seconds. It will be appreciated in light of the disclosure that it can be necessary to read the hardware collection parameters for the higher sampling rate from the route list, as well as permit hardware auto-scaling, or the resetting of other necessary hardware collection parameters, or both. To that end, a few seconds of latency can be added to accommodate the changes in sampling rate. In other instances, introducing latency can accommodate hardware autoscaling and changes to hardware collection parameters that can be required when using the lower sampling rate disclosed herein. In addition to accommodating the change in sampling rate, additional time is needed for reading the route point information from the database (i.e., where to monitor and where to monitor next), displaying the route information, and processing the waveform data. Moreover, display of the waveform data and/or associated spectra can also consume significant time. In light of the above, 15 seconds to 20 seconds can elapse while obtaining waveform data at each measurement point.

In further examples, additional sampling rates can be added but this can make the total amount time for the vibration survey even longer because time adds up from changeover time from one sampling rate to another and from the time to obtain additional data at different sampling rate. In one example, a lower sampling rate is used, such as a sampling rate of 128 Hz where Fmax = 50 Hz. By way of this example, the vibration survey would, therefore, require an additional 36 seconds for the first set of averaged data at this sampling rate, in addition to others mentioned above, and consequently the total time spent at each measurement point increases even more dramatically. Further embodiments include using similar digital streaming of gap free waveform data as disclosed herein for use with wind turbines and other machines that can have relatively slow speed rotating or oscillating systems. In many examples, the waveform data collected can include long samples of data at a relatively high-sampling rate. In one example, the sampling rate can be 100 kHz and the sampling duration can be for two minutes on all of the channels being recorded. In many examples, one channel can be for the single axis reference sensor and three more data channels can be for the tri-axial three channel sensor. It will be appreciated in light of the disclosure that the long data length can be shown to facilitate detection of extremely low frequency phenomena. The long data length can also be shown to accommodate the inherent speed variability in wind turbine operations. Additionally, the long data length can further be shown to provide the opportunity for using numerous averages such as those discussed herein, to achieve very high spectral resolution, and to make feasible tape loops for certain spectral analyses. Many multiple advanced analytical techniques can now become available because such techniques can use the available long uninterrupted length of waveform data in accordance with the present disclosure.

It will also be appreciated in light of the disclosure that the simultaneous collection of waveform data from multiple channels can facilitate performing transfer functions between multiple channels. Moreover, the simultaneous collection of waveform data from multiple channels facilitates establishing phase relationships across the machine so that more sophisticated correlations can be utilized by relying on the fact that the waveforms from each of the channels are collected simultaneously. In other examples, more channels in the data collection can be used to reduce the time it takes to complete the overall vibration survey by allowing for simultaneous acquisition of waveform data from multiple sensors that otherwise would have to be acquired, in a subsequent fashion, moving sensor to sensor in the vibration survey.

The present disclosure includes the use of at least one of the single-axis reference probe on one of the channels to allow for acquisition of relative phase comparisons between channels. The reference probe can be an accelerometer or other type of transducer that is not moved and, therefore, fixed at an unchanging location during the vibration survey of one machine. Multiple reference probes can each be deployed as at suitable locations fixed in place (i.e., at unchanging locations) throughout the acquisition of vibration data during the vibration survey. In certain examples, up to seven reference probes can be deployed depending on the capacity of the data collection module 2160 or the like. Using transfer functions or similar techniques, the relative phases of all channels may be compared with one another at all selected frequencies. By keeping the one or more reference probes fixed at their unchanging locations while moving or monitoring the other tri-axial vibration sensors, it can be shown that the entire machine can be mapped with regard to amplitude and relative phase. This can be shown to be true even when there are more measurement points than channels of data collection. With this information, an operating deflection shape can be created that can show dynamic movements of the machine in 3 D, which can provide an invaluable diagnostic tool. In embodiments, the one or more reference probes can provide relative phase, rather than absolute phase. It will be appreciated in light of the disclosure that relative phase may not be as valuable absolute phase for some purposes, but the relative phase the information can still be shown to be very useful.

In embodiments, the sampling rates used during the vibration survey can be digitally synchronized to predetermined operational frequencies that can relate to pertinent parameters of the machine such as rotating or oscillating speed. Doing this, permits extracting even more information using synchronized averaging techniques. It will be appreciated in light of the disclosure that this can be done without the use of a key phasor or a reference pulse from a rotating shaft, which is usually not available for route collected data. As such, non-synchronous signals can be removed from a complex signal without the need to deploy synchronous averaging using the key phasor. This can be shown to be very powerful when analyzing a particular pinion in a gearbox or generally applied to any component within a complicated mechanical mechanism. In many instances, the key phasor or the reference pulse is rarely available with route collected data, but the techniques disclosed herein can overcome this absence. In embodiments, there can be multiple shafts running at different speeds within the machine being analyzed. In certain instances, there can be a single-axis reference probe for each shaft. In other instances, it is possible to relate the phase of one shaft to another shaft using only one single axis reference probe on one shaft at its unchanging location. In embodiments, variable speed equipment can be more readily analyzed with relatively longer duration of data relative to single speed equipment. The vibration survey can be conducted at several machine speeds within the same contiguous set of vibration data using the same techniques disclosed herein. These techniques can also permit the study of the change of the relationship between vibration and the change of the rate of speed that was not available before.

In embodiments, there are numerous analytical techniques that can emerge from because raw waveform data can be captured in a gap-free digital format as disclosed herein. The gap-free digital format can facilitate many paths to analyze the waveform data in many ways after the fact to identify specific problems. The vibration data collected in accordance with the techniques disclosed herein can provide the analysis of transient, semi-periodic and very low frequency phenomena. The waveform data acquired in accordance with the present disclosure can contain relatively longer streams of raw gap-free waveform data that can be conveniently played back as needed, and on which many and varied sophisticated analytical techniques can be performed. A large number of such techniques can provide for various forms of filtering to extract low amplitude modulations from transient impact data that can be included in the relatively longer stream of raw gap-free waveform data. It will be appreciated in light of the disclosure that in past data collection practices, these types of phenomena were typically lost by the averaging process of the spectral processing algorithms because the goal of the previous data acquisition module was purely periodic signals; or these phenomena were lost to file size reduction methodologies due to the fact that much of the content from an original raw signal was typically discarded knowing it would not be used.

In embodiments, there is a method of monitoring vibration of a machine having at least one shaft supported by a set of bearings. The method includes monitoring a first data channel assigned to a single-axis sensor at an unchanging location associated with the machine. The method also includes monitoring a second, third, and fourth data channel assigned to a three-axis sensor. The method further includes recording gap-free digital waveform data simultaneously from all of the data channels while the machine is in operation; and determining a change in relative phase based on the digital waveform data. The method also includes the tri-axial sensor being located at a plurality of positions associated with the machine while obtaining the digital waveform. In embodiments, the second, third, and fourth channels are assigned together to a sequence of tri-axial sensors each located at different positions associated with the machine. In embodiments, the data is received from all of the sensors on all of their channels simultaneously.

The method also includes determining an operating deflection shape based on the change in relative phase information and the waveform data. In embodiments, the unchanging location of the reference sensor is a position associated with a shaft of the machine. In embodiments, the tri-axial sensors in the sequence of the tri-axial sensors are each located at different positions and are each associated with different bearings in the machine. In embodiments, the unchanging location is a position associated with a shaft of the machine and, wherein, the tri-axial sensors in the sequence of the tri-axial sensors are each located at different positions and are each associated with different bearings that support the shaft in the machine. The various embodiments include methods of sequentially monitoring vibration or similar process parameters and signals of a rotating or oscillating machine or analogous process machinery from a number of channels simultaneously, which can be known as an ensemble. In various examples, the ensemble can include one to eight channels. In further examples, an ensemble can represent a logical measurement grouping on the equipment being monitored whether those measurement locations are temporary for measurement, supplied by the original equipment manufacturer, retrofit at a later date, or one or more combinations thereof.

In one example, an ensemble can monitor bearing vibration in a single direction. In a further example, an ensemble can monitor three different directions (e.g., orthogonal directions) using a tri-axial sensor. In yet further examples, an ensemble can monitor four or more channels where the first channel can monitor a single axis vibration sensor, and the second, the third, and the fourth channels can monitor each of the three directions of the tri-axial sensor. In other examples, the ensemble can be fixed to a group of adjacent bearings on the same piece of equipment or an associated shaft. The various embodiments provide methods that include strategies for collecting waveform data from various ensembles deployed in vibration studies or the like in a relatively more efficient manner. The methods also include simultaneously monitoring of a reference channel assigned to an unchanging reference location associated with the ensemble monitoring the machine. The cooperation with the reference channel can be shown to support a more complete correlation of the collected waveforms from the ensembles. The reference sensor on the reference channel can be a single axis vibration sensor, or a phase reference sensor that can be triggered by a reference location on a rotating shaft or the like. As disclosed herein, the methods can further include recording gap-free digital waveform data simultaneously from all of the channels of each ensemble at a relatively high rate of sampling so as to include all frequencies deemed necessary for the proper analysis of the machinery being monitored while it is in operation. The data from the ensembles can be streamed gap-free to a storage medium for subsequent processing that can be connected to a cloud network facility, a local data link, Bluetooth™ connectivity, cellular data connectivity, or the like.

In embodiments, the methods disclosed herein include strategies for collecting data from the various ensembles including digital signal processing techniques that can be subsequently applied to data from the ensembles to emphasize or better isolate specific frequencies or waveform phenomena. This can be in contrast with current methods that collect multiple sets of data at different sampling rates, or with different hardware filtering configurations including integration, that provide relatively less post-processing flexibility because of the commitment to these same (known as a priori hardware configurations). These same hardware configurations can also be shown to increase time of the vibration survey due to the latency delays associated with configuring the hardware for each independent test. In embodiments, the methods for collecting data from various ensembles include data marker technology that can be used for classifying sections of streamed data as homogenous and belonging to a specific ensemble. In one example, a classification can be defined as operating speed. In doing so, a multitude of ensembles can be created from what conventional systems would collect as only one. The many embodiments include post-processing analytic techniques for comparing the relative phases of all the frequencies of interest not only between each channel of the collected ensemble but also between all of the channels of all of the ensembles being monitored, when applicable.

The present disclosure can include markers that can be applied to a time mark or a sample length within the raw waveform data. The markers generally fall into two categories: preset or dynamic. The preset markers can correlate to preset or existing operating conditions (e.g., load, head pressure, air flow cubic feet per minute, ambient temperature, RPMs, and the like.). These preset markers can be fed into the data acquisition system directly. In certain instances, the preset markers can be collected on data channels in parallel with the waveform data (e.g., waveforms for vibration, current, voltage, etc.). Alternatively, the values for the preset markers can be entered manually.

For dynamic markers such as trending data, it can be important to compare similar data like comparing vibration amplitudes and patterns with a repeatable set of operating parameters. One example of the present disclosure includes one of the parallel channel inputs being a key phasor trigger pulse from an operating shaft that can provide RPM information at the instantaneous time of collection. In this example of dynamic markers, sections of collected waveform data can be marked with appropriate speeds or speed ranges.

The present disclosure can also include dynamic markers that can correlate to data that can be derived from post processing and analytics performed on the sample waveform. In further embodiments, the dynamic markers can also correlate to post-collection derived parameters including RPMs, as well as other operationally derived metrics such as alarm conditions like a maximum RPM. In certain examples, many modern pieces of equipment that are candidates for a vibration survey with the portable data collection systems described herein do not include tachometer information. This can be true because it is not always practical or cost-justifiable to add a tachometer even though the measurement of RPM can be of primary importance for the vibration survey and analysis. It will be appreciated that for fixed speed machinery obtaining an accurate RPM measurement can be less important especially when the approximate speed of the machine can be ascertained before-hand; however, variable-speed drives are becoming more and more prevalent. It will also be appreciated in light of the disclosure that various signal processing techniques can permit the derivation of RPM from the raw data without the need for a dedicated tachometer signal.

In many embodiments, the RPM information can be used to mark segments of the raw waveform data over its collection history. Further embodiments include techniques for collecting instrument data following a prescribed route of a vibration study. The dynamic markers can enable analysis and trending software to utilize multiple segments of the collection interval indicated by the markers (e.g., two minutes) as multiple historical collection ensembles, rather than just one as done in previous systems where route collection systems would historically store data for only one RPM setting. This could, in turn, be extended to any other operational parameter such as load setting, ambient temperature, and the like, as previously described. The dynamic markers, however, that can be placed in a type of index file pointing to the raw data stream can classify portions of the stream in homogenous entities that can be more readily compared to previously collected portions of the raw data stream

The many embodiments include the hybrid relational metadata-binary storage approach that can use the best of pre-existing technologies for both relational and raw data streams. In embodiments, the hybrid relational metadata - binary storage approach can marry them together with a variety of marker linkages. The marker linkages can permit rapid searches through the relational metadata and can allow for more efficient analyses of the raw data using conventional SQL techniques with pre-existing technology. This can be shown to permit utilization of many of the capabilities, linkages, compatibilities, and extensions that conventional database technologies do not provide.

The marker linkages can also permit rapid and efficient storage of the raw data using conventional binary storage and data compression techniques. This can be shown to permit utilization of many of the capabilities, linkages, compatibilities, and extensions that conventional raw data technologies provide such as TMDS (National Instruments), UFF (Universal File Format such as UFF58), and the like. The marker linkages can further permit using the marker technology links where a vastly richer set of data from the ensembles can be amassed in the same collection time as more conventional systems. The richer set of data from the ensembles can store data snapshots associated with predetermined collection criterion and the proposed system can derive multiple snapshots from the collected data streams utilizing the marker technology. In doing so, it can be shown that a relatively richer analysis of the collected data can be achieved. One such benefit can include more trending points of vibration at a specific frequency or order of running speed versus RPM, load, operating temperature, flow rates, and the like, which can be collected for a similar time relative to what is spent collecting data with a conventional system.

In embodiments, the platform 100 may include the local data collection system 102 deployed in the environment 104 to monitor signals from machines, elements of the machines and the environment of the machines including heavy duty machines deployed at a local job site or at distributed job sites under common control. The heavy-duty machines may include earthmoving equipment, heavy duty on-road industrial vehicles, heavy duty off-road industrial vehicles, industrial machines deployed in various settings such as turbines, turbomachinery, generators, pumps, pulley systems, manifold and valve systems, and the like. In embodiments, heavy industrial machinery may also include earthmoving equipment, earth-compacting equipment, hauling equipment, hoisting equipment, conveying equipment, aggregate production equipment, equipment used in concrete construction, and piledriving equipment. In examples, earth moving equipment may include excavators, backhoes, loaders, bulldozers, skid steer loaders, trenchers, motor graders, motor scrapers, crawler loaders, and wheeled loading shovels. In examples, construction vehicles may include dumpers, tankers, tippers, and trailers. In examples, material handling equipment may include cranes, conveyors, forklift, and hoists. In examples, construction equipment may include tunnel and handling equipment, road rollers, concrete mixers, hot mix plants, road making machines (compactors), stone crashers, pavers, slurry seal machines, spraying and plastering machines, and heavy-duty pumps. Further examples of heavy industrial equipment may include different systems such as implement traction, structure, power train, control, and information. Heavy industrial equipment may include many different powertrains and combinations thereof to provide power for locomotion and to also provide power to accessories and onboard functionality. In each of these examples, the platform 100 may deploy the local data collection system 102 into the environment 104 in which these machines, motors, pumps, and the like, operate and directly connected integrated into each of the machines, motors, pumps, and the like.

In embodiments, the platform 100 may include the local data collection system 102 deployed in the environment 104 to monitor signals from machines in operation and machines in being constructed such as turbine and generator sets like Siemens™ SGT6-5000F™ gas turbine, an SST-900™ steam turbine, an SGen-6-1000A™ generator, and an SGen6-100A™ generator, and the like. In embodiments, the local data collection system 102 may be deployed to monitor steam turbines as they rotate in the currents caused by hot water vapor that may be directed through the turbine but otherwise generated from a different source such as from gas-fired burners, nuclear cores, molten salt loops and the like. In these systems, the local data collection system 102 may monitor the turbines and the water or other fluids in a closed loop cycle in which water condenses and is then heated until it evaporates again. The local data collection system 102 may monitor the steam turbines separately from the fuel source deployed to heat the water to steam. In examples, working temperatures of steam turbines may be between 500 and 650 °C. In many embodiments, an array of steam turbines may be arranged and configured for high, medium, and low pressure, so they may optimally convert the respective steam pressure into rotational movement.

The local data collection system 102 may also be deployed in a gas turbines arrangement and therefore not only monitor the turbine in operation but also monitor the hot combustion gases feed into the turbine that may be in excess of 1,500 °C. Because these gases are much hotter than those in steam turbines, the blades may be cooled with air that may flow out of small openings to create a protective film or boundary layer between the exhaust gases and the blades. This temperature profile may be monitored by the local data collection system 102. Gas turbine engines, unlike typical steam turbines, include a compressor, a combustion chamber, and a turbine all of which are journaled for rotation with a rotating shaft. The construction and operation of each of these components may be monitored by the local data collection system 102.

In embodiments, the platform 100 may include the local data collection system 102 deployed in the environment 104 to monitor signals from water turbines serving as rotary engines that may harvest energy from moving water and are used for electric power generation. The type of water turbine or hydro-power selected for a project may be based on the height of standing water, often referred to as head, and the flow (or volume of water) at the site. In this example, a generator may be placed at the top of a shaft that connects to the water turbine. As the turbine catches the naturally moving water in its blade and rotates, the turbine sends rotational power to the generator to generate electrical energy. In doing so, the platform 100 may monitor signals from the generators, the turbines, the local water system, flow controls such as dam windows and sluices. Moreover, the platform 100 may monitor local conditions on the electric grid including load, predicted demand, frequency response, and the like, and include such information in the monitoring and control deployed by platform 100 in these hydroelectric settings.

In embodiments, the platform 100 may include the local data collection system 102 deployed in the environment 104 to monitor signals from energy production environments, such as thermal, nuclear, geothermal, chemical, biomass, carbon-based fuels, hybrid-renewable energy plants, and the like. Many of these plants may use multiple forms of energy harvesting equipment like wind turbines, hydro turbines, and steam turbines powered by heat from nuclear, gas-fired, solar, and molten salt heat sources. In embodiments, elements in such systems may include transmission lines, heat exchangers, desulphurization scrubbers, pumps, coolers, recuperators, chillers, and the like. In embodiments, certain implementations of turbomachinery, turbines, scroll compressors, and the like may be configured in arrayed control so as to monitor large facilities creating electricity for consumption, providing refrigeration, creating steam for local manufacture and heating, and the like, and that arrayed control platforms may be provided by the provider of the industrial equipment such as Honeywell and their Experion™ PKS platform. In embodiments, the platform 100 may specifically communicate with and integrate the local manufacturer-specific controls and may allow equipment from one manufacturer to communicate with other equipment. Moreover, the platform 100 provides allows for the local data collection system 102 to collect information across systems from many different manufacturers. In embodiments, the platform 100 may include the local data collection system 102 deployed in the environment 104 to monitor signals from marine industrial equipment, marine diesel engines, shipbuilding, oil and gas plants, refineries, petrochemical plant, ballast water treatment solutions, marine pumps and turbines, and the like.

In embodiments, the platform 100 may include the local data collection system 102 deployed in the environment 104 to monitor signals from heavy industrial equipment and processes including monitoring one or more sensors. By way of this example, sensors may be devices that may be used to detect or respond to some type of input from a physical environment, such as an electrical, heat, or optical signal. In embodiments, the local data collection system 102 may include multiple sensors such as, without limitation, a temperature sensor, a pressure sensor, a torque sensor, a flow sensor, a heat sensor, a smoke sensor, an arc sensor, a radiation sensor, a position sensor, an acceleration sensor, a strain sensor, a pressure cycle sensor, a pressure sensor, an air temperature sensor, and the like. The torque sensor may encompass a magnetic twist angle sensor. In one example, the torque and speed sensors in the local data collection system 102 may be similar to those discussed in U.S. Patent Number 8,352,149 to Meachem, issued 8 January 2013 In embodiments, one or more sensors may be provided such as a tactile sensor, a biosensor, a chemical sensor, an image sensor, a humidity sensor, an inertial sensor, and the like.

In embodiments, the platform 100 may include the local data collection system 102 deployed in the environment 104 to monitor signals from sensors that may provide signals for fault detection including excessive vibration, incorrect material, incorrect material properties, trueness to the proper size, trueness to the proper shape, proper weight, trueness to balance. Additional fault sensors include those for inventory control and for inspections such as to confirm that parts are packaged to plan, parts are to tolerance in a plan, occurrence of packaging damage or stress, and sensors that may indicate the occurrence of shock or damage in transit. Additional fault sensors may include detection of the lack of lubrication, over lubrication, the need for cleaning of the sensor detection window, the need for maintenance due to low lubrication, the need for maintenance due to blocking or reduced flow in a lubrication region, and the like.

In embodiments, the platform 100 may include the local data collection system 102 deployed in the environment 104 that includes aircraft operations and manufacture including monitoring signals from sensors for specialized applications such as sensors used in an aircraft's Attitude and Heading Reference System (AHRS), such as gyroscopes, accelerometers, and magnetometers. In embodiments, the platform 100 may include the local data collection system 102 deployed in the environment 104 to monitor signals from image sensors such as semiconductor charge coupled devices (CCDs), active pixel sensors, in complementary metal-oxide-semiconductor (CMOS) or N-type metal-oxide-semiconductor (NMOS, Live MOS) technologies. In embodiments, the platform 100 may include the local data collection system 102 deployed in the environment 104 to monitor signals from sensors such as an infra-red (IR) sensor, an ultraviolet (UV) sensor, a touch sensor, a proximity sensor, and the like. In embodiments, the platform 100 may include the local data collection system 102 deployed in the environment 104 to monitor signals from sensors configured for optical character recognition (OCR), reading barcodes, detecting surface acoustic waves, detecting transponders, communicating with home automation systems, medical diagnostics, health monitoring, and the like.

In embodiments, the platform 100 may include the local data collection system 102 deployed in the environment 104 to monitor signals from sensors such as a Micro-Electro-Mechanical Systems (MEMS) sensor, such as ST Microelectronic's™ LSM303AH smart MEMS sensor, which may include an ultra-low-power high-performance system-in-package featuring a 3D digital linear acceleration sensor and a 3D digital magnetic sensor.

In embodiments, the platform 100 may include the local data collection system 102 deployed in the environment 104 to monitor signals from additional large machines such as turbines, windmills, industrial vehicles, robots, and the like. These large mechanical machines include multiple components and elements providing multiple subsystems on each machine. To that end, the platform 100 may include the local data collection system 102 deployed in the environment 104 to monitor signals from individual elements such as axles, bearings, belts, buckets, gears, shafts, gear boxes, cams, carriages, camshafts, clutches, brakes, drums, dynamos, feeds, flywheels, gaskets, pumps, jaws, robotic arms, seals, sockets, sleeves, valves, wheels, actuators, motors, servomotor, and the like. Many of the machines and their elements may include servomotors. The local data collection system 102 may monitor the motor, the rotary encoder, and the potentiometer of the servomechanism to provide three-dimensional detail of position, placement, and progress of industrial processes.

In embodiments, the platform 100 may include the local data collection system 102 deployed in the environment 104 to monitor signals from gear drives, powertrains, transfer cases, multispeed axles, transmissions, direct drives, chain drives, belt-drives, shaft-drives, magnetic drives, and similar meshing mechanical drives. In embodiments, the platform 100 may include the local data collection system 102 deployed in the environment 104 to monitor signals from fault conditions of industrial machines that may include overheating, noise, grinding gears, locked gears, excessive vibration, wobbling, under-inflation, over-inflation, and the like. Operation faults, maintenance indicators, and interactions from other machines may cause maintenance or operational issues may occur during operation, during installation, and during maintenance. The faults may occur in the mechanisms of the industrial machines but may also occur in infrastructure that supports the machine such as its wiring and local installation platforms. In embodiments, the large industrial machines may face different types of fault conditions such as overheating, noise, grinding gears, excessive vibration of machine parts, fan vibration problems, problems with large industrial machines rotating parts.

In embodiments, the platform 100 may include the local data collection system 102 deployed in the environment 104 to monitor signals from industrial machinery including failures that may be caused by premature bearing failure that may occur due to contamination or loss of bearing lubricant. In another example, a mechanical defect such as misalignment of bearings may occur. Many factors may contribute to the failure such as metal fatigue, therefore, the local data collection system 102 may monitor cycles and local stresses. By way of this example, the platform 100 may monitor the incorrect operation of machine parts, lack of maintenance and servicing of parts, corrosion of vital machine parts, such as couplings or gearboxes, misalignment of machine parts, and the like. Though the fault occurrences cannot be completely stopped, many industrial breakdowns may be mitigated to reduce operational and financial losses. The platform 100 provides real-time monitoring and predictive maintenance in many industrial environments wherein it has been shown to present a cost-savings over regularly-scheduled maintenance processes that replace parts according to a rigid expiration of time and not actual load and wear and tear on the element or machine. To that end, the platform 10 may provide reminders of, or perform some, preventive measures such as adhering to operating manual and mode instructions for machines, proper lubrication, and maintenance of machine parts, minimizing or eliminating overrun of machines beyond their defined capacities, replacement of worn but still functional parts as needed, properly training the personnel for machine use, and the like.

In embodiments, the platform 100 may include the local data collection system 102 deployed in the environment 104 to monitor multiple signals that may be carried by a plurality of physical, electronic, and symbolic formats or signals. The platform 100 may employ signal processing including a plurality of mathematical, statistical, computational, heuristic, and linguistic representations and processing of signals and a plurality of operations needed for extraction of useful information from signal processing operations such as techniques for representation, modeling, analysis, synthesis, sensing, acquisition, and extraction of information from signals. In examples, signal processing may be performed using a plurality of techniques, including but not limited to transformations, spectral estimations, statistical operations, probabilistic and stochastic operations, numerical theory analysis, data mining, and the like. The processing of various types of signals forms the basis of many electrical or computational process. As a result, signal processing applies to almost all disciplines and applications in the industrial environment such as audio and video processing, image processing, wireless communications, process control, industrial automation, financial systems, feature extraction, quality improvements such as noise reduction, image enhancement, and the like. Signal processing for images may include pattern recognition for manufacturing inspections, quality inspection, and automated operational inspection and maintenance. The platform 100 may employ many pattern recognition techniques including those that may classify input data into classes based on key features with the objective of recognizing patterns or regularities in data. The platform 100 may also implement pattern recognition processes with machine learning operations and may be used in applications such as computer vision, speech and text processing, radar processing, handwriting recognition, CAD systems, and the like. The platform 100 may employ supervised classification and unsupervised classification. The supervised learning classification algorithms may be based to create classifiers for image or pattern recognition, based on training data obtained from different object classes. The unsupervised learning classification algorithms may operate by finding hidden structures in unlabeled data using advanced analysis techniques such as segmentation and clustering. For example, some of the analysis techniques used in unsupervised learning may include K-means clustering, Gaussian mixture models, Hidden Markov models, and the like. The algorithms used in supervised and unsupervised learning methods of pattern recognition enable the use of pattern recognition in various high precision applications. The platform 100 may use pattern recognition in face detection related applications such as security systems, tracking, sports related applications, fingerprint analysis, medical and forensic applications, navigation and guidance systems, vehicle tracking, public infrastructure systems such as transport systems, license plate monitoring, and the like.

In embodiments, the platform 100 may include the local data collection system 102 deployed in the environment 104 using machine learning to enable derivation-based learning outcomes from computers without the need to program them. The platform 100 may, therefore, learn from and make decisions on a set of data, by making data-driven predictions and adapting according to the set of data. In embodiments, machine learning may involve performing a plurality of machine learning tasks by machine learning systems, such as supervised learning, unsupervised learning, and reinforcement learning. Supervised learning may include presenting a set of example inputs and desired outputs to the machine learning systems. Unsupervised learning may include the learning algorithm itself structuring its input by methods such as pattern detection and/or feature learning. Reinforcement learning may include the machine learning systems performing in a dynamic environment and then providing feedback about correct and incorrect decisions. In examples, machine learning may include a plurality of other tasks based on an output of the machine learning system. In examples, the tasks may also be classified as machine learning problems such as classification, regression, clustering, density estimation, dimensionality reduction, anomaly detection, and the like. In examples, machine learning may include a plurality of mathematical and statistical techniques. In examples, the many types of machine learning algorithms may include decision tree based learning, association rule learning, deep learning, artificial neural networks, genetic learning algorithms, inductive logic programming, support vector machines (SVMs), Bayesian network, reinforcement learning, representation learning, rule-based machine learning, sparse dictionary learning, similarity and metric learning, learning classifier systems (LCS), logistic regression, random forest, K-Means, gradient boost and adaboost, K-nearest neighbors (KNN), a priori algorithms, and the like. In embodiments, certain machine learning algorithms may be used (such as genetic algorithms defined for solving both constrained and unconstrained optimization problems that may be based on natural selection, the process that drives biological evolution). By way of this example, genetic algorithms may be deployed to solve a variety of optimization problems that are not well suited for standard optimization algorithms, including problems in which the objective functions are discontinuous, not differentiable, stochastic, or highly nonlinear. In an example, the genetic algorithm may be used to address problems of mixed integer programming, where some components restricted to being integer-valued. Genetic algorithms and machine learning techniques and systems may be used in computational intelligence systems, computer vision, Natural Language Processing (NLP), recommender systems, reinforcement learning, building graphical models, and the like. By way of this example, the machine learning systems may be used to perform intelligent computing based control and be responsive to tasks in a wide variety of systems (such as interactive websites and portals, brain-machine interfaces, online security and fraud detection systems, medical applications such as diagnosis and therapy assistance systems, classification of DNA sequences, and the like). In examples, machine learning systems may be used in advanced computing applications (such as online advertising, natural language processing, robotics, search engines, software engineering, speech and handwriting recognition, pattern matching, game playing, computational anatomy, bioinformatics systems and the like). In an example, machine learning may also be used in financial and marketing systems (such as for user behavior analytics, online advertising, economic estimations, financial market analysis, and the like).

Additional details are provided below in connection with the methods, systems, devices, and components depicted in connection with Figures 1 through 6. In embodiments, methods and systems are disclosed herein for cloud-based, machine pattern recognition based on fusion of remote, analog industrial sensors. For example, data streams from vibration, pressure, temperature, accelerometer, magnetic, electrical field, and other analog sensors may be multiplexed or otherwise fused, relayed over a network, and fed into a cloud-based machine learning facility, which may employ one or more models relating to an operating characteristic of an industrial machine, an industrial process, or a component or element thereof. A model may be created by a human who has experience with the industrial environment and may be associated with a training data set (such as models created by human analysis or machine analysis of data that is collected by the sensors in the environment, or sensors in other similar environments. The learning machine may then operate on other data, initially using a set of rules or elements of a model, such as to provide a variety of outputs, such as classification of data into types, recognition of certain patterns (such as those indicating the presence of faults, orthoses indicating operating conditions, such as fuel efficiency, energy production, or the like). The machine learning facility may take feedback, such as one or more inputs or measures of success, such that it may train, or improve, its initial model (such as improvements by adjusting weights, rules, parameters, or the like, based on the feedback). For example, a model of fuel consumption by an industrial machine may include physical model parameters that characterize weights, motion, resistance, momentum, inertia, acceleration, and other factors that indicate consumption, and chemical model parameters (such as those that predict energy produced and/or consumed e.g., such as through combustion, through chemical reactions in battery charging and discharging, and the like). The model may be refined by feeding in data from sensors disposed in the environment of a machine, in the machine, and the like, as well as data indicating actual fuel consumption, so that the machine can provide increasingly accurate, sensor-based, estimates of fuel consumption and can also provide output that indicate what changes can be made to increase fuel consumption (such as changing operation parameters of the machine or changing other elements of the environment, such as the ambient temperature, the operation of a nearby machine, or the like). For example, if a resonance effect between two machines is adversely affecting one of them, the model may account for this and automatically provide an output that results in changing the operation of one of the machines (such as to reduce the resonance, to increase fuel efficiency of one or both machines). By continuously adjusting parameters to cause outputs to match actual conditions, the machine learning facility may self-organize to provide a highly accurate model of the conditions of an environment (such as for predicting faults, optimizing operational parameters, and the like). This may be used to increase fuel efficiency, to reduce wear, to increase output, to increase operating life, to avoid fault conditions, and for many other purposes.

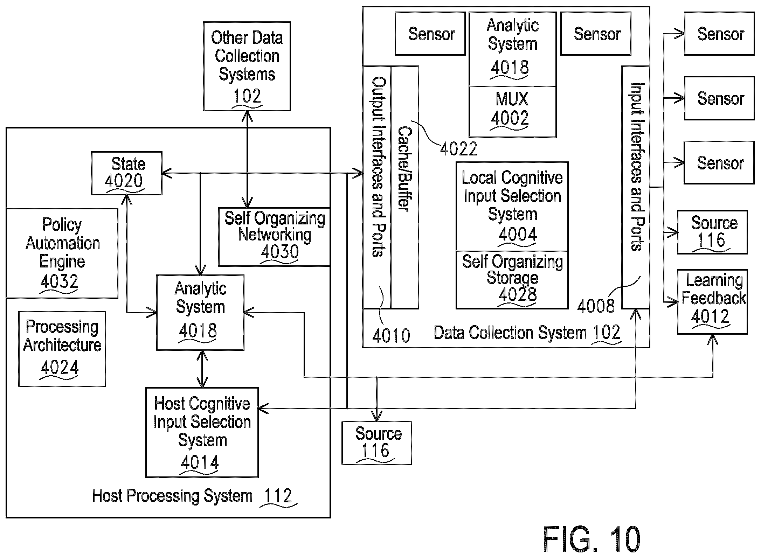

Figure 10 illustrates components and interactions of a data collection architecture involving the application of cognitive and machine learning systems to data collection and processing. Referring to Figure 10, a data collection system 102 may be disposed in an environment (such as an industrial environment where one or more complex systems, such as electro-mechanical systems and machines are manufactured, assembled, or operated). The data collection system 102 may include onboard sensors and may take input, such as through one or more input interfaces or ports 4008, from one or more sensors (such as analog or digital sensors of any type disclosed herein) and from one or more input sources 116 (such as sources that may be available through Wi-Fi, Bluetooth, NFC, or other local network connections or over the Internet). Sensors may be combined and multiplexed (such as with one or more multiplexers 4002). Data may be cached or buffered in a cache/buffer 4022 and made available to external systems, such as a remote host processing system 112 as described elsewhere in this disclosure (which may include an extensive processing architecture 4024, including any of the elements described in connection with other embodiments described throughout this disclosure and in the Figure), though one or more output interfaces and ports 4010 (which may in embodiments be separate from or the same as the input interfaces and ports 4008). The data collection system 102 may be configured to take input from a host processing system 112, such as input from an analytic system 4018, which may operate on data from the data collection system 102 and data from other input sources 116 to provide analytic results, which in turn may be provided as a learning feedback input 4012 to the data collection system, such as to assist in configuration and operation of the data collection system 102.

Combination of inputs (including selection of what sensors or input sources to turn "on" or "off") may be performed under the control of machine-based intelligence, such as using a local cognitive input selection system 4004, an optionally remote cognitive input selection system 4114, or a combination of the two. The cognitive input selection systems 4004, 4014 may use intelligence and machine learning capabilities described elsewhere in this disclosure, such as using detected conditions (such as conditions informed by the input sources 116 or sensors), state information (including state information determined by a machine state recognition system 4020 that may determine a state), such as relating to an operational state, an environmental state, a state within a known process or workflow, a state involving a fault or diagnostic condition, or many others. This may include optimization of input selection and configuration based on learning feedback from the learning feedback system 4012, which may include providing training data (such as from the host processing system 112 or from other data collection systems 102 either directly or from the host 112) and may include providing feedback metrics, such as success metrics calculated within the analytic system 4018 of the host processing system 112. For example, if a data stream consisting of a particular combination of sensors and inputs yields positive results in a given set of conditions (such as providing improved pattern recognition, improved prediction, improved diagnosis, improved yield, improved return on investment, improved efficiency, or the like), then metrics relating to such results from the analytic system 4018 can be provided via the learning feedback system 4012 to the cognitive input selection systems 4004, 4014 to help configure future data collection to select that combination in those conditions (allowing other input sources to be de-selected, such as by powering down the other sensors). In embodiments, selection and de-selection of sensor combinations, under control of one or more of the cognitive input selection systems 4004, may occur with automated variation, such as using genetic programming techniques, based on learning feedback 4012, such as from the analytic system 4018, effective combinations for a given state or set of conditions are promoted, and less effective combinations are demoted, resulting in progressive optimization and adaptation of the local data collection system to each unique environment. Thus, an automatically adapting, multi-sensor data collection system is provided, where cognitive input selection is used (with feedback) to improve the effectiveness, efficiency, or other performance parameters of the data collection system within its particular environment. Performance parameters may relate to overall system metrics (such as financial yields, process optimization results, energy production or usage, and the like), analytic metrics (such as success in recognizing patterns, making predictions, classifying data, or the like), and local system metrics (such as bandwidth utilization, storage utilization, power consumption, and the like). In embodiments, the analytic system 4018, the state system 4020 and the cognitive input selection system 4114 of a host may take data from multiple data collection systems 102, such that optimization (including of input selection) may be undertaken through coordinated operation of multiple systems 102. For example, the cognitive input selection system 4114 may understand that if one data collection system 102 is already collecting vibration data for an X-axis, the X-axis vibration sensor for the other data collection system might be turned off, in favor of getting Y-axis data from the other data collector 102. Thus, through coordinated collection by the host cognitive input selection system 4114, the activity of multiple collectors 102, across a host of different sensors, can provide for a rich data set for the host processing system 112, without wasting energy, bandwidth, storage space, or the like. As noted above, optimization may be based on overall system success metrics, analytic success metrics, and local system metrics, or a combination of the above.

Methods and systems are disclosed herein for cloud-based, machine pattern analysis of state information from multiple industrial sensors to provide anticipated state information for an industrial system. In embodiments, machine learning may take advantage of a state machine, such as tracking states of multiple analog and/or digital sensors, feeding the states into a pattern analysis facility, and determining anticipated states of the industrial system based on historical data about sequences of state information. For example, where a temperature state of an industrial machine exceeds a certain threshold and is followed by a fault condition, such as breaking down of a set of bearings, that temperature state may be tracked by a pattern recognizer, which may produce an output data structure indicating an anticipated bearing fault state (whenever an input state of a high temperature is recognized). A wide range of measurement values and anticipated states may be managed by a state machine, relating to temperature, pressure, vibration, acceleration, momentum, inertia, friction, heat, heat flux, galvanic states, magnetic field states, electrical field states, capacitance states, charge and discharge states, motion, position, and many others. States may comprise combined states, where a data structure includes a series of states, each of which is represented by a place in a byte-like data structure. For example, an industrial machine may be characterized by a genetic structure, such as one that provides pressure, temperature, vibration, and acoustic data, the measurement of which takes one place in the data structure, so that the combined state can be operated on as a byte-like structure, such as a structure for compactly characterizing the current combined state of the machine or environment, or compactly characterizing the anticipated state. This byte-like structure can be used by a state machine for machine learning, such as pattern recognition that operates on the structure to determine patterns that reflect combined effects of multiple conditions. A wide variety of such structure can be tracked and used, such as in machine learning, representing various combinations, of various length, of the different elements that can be sensed in an industrial environment. In embodiments, byte-like structures can be used in a genetic programming technique, such as by substituting different types of data, or data from varying sources, and tracking outcomes over time, so that one or more favorable structures emerges based on the success of those structures when used in real world situations, such as indicating successful predictions of anticipated states, or achievement of success operational outcomes, such as increased efficiency, successful routing of information, achieving increased profits, or the like. That is, by varying what data types and sources are used in byte-like structures that are used for machine optimization over time, a genetic programming-based machine learning facility can "evolve" a set of data structures, consisting of a favorable mix of data types (e.g., pressure, temperature, and vibration), from a favorable mix of data sources (e.g., temperature is derived from sensor X, while vibration comes from sensor Y), for a given purpose. Different desired outcomes may result in different data structures that are best adapted to support effective achievement of those outcomes over time with application of machine learning and promotion of structures with favorable results for the desired outcome in question by genetic programming. The promoted data structures may provide compact, efficient data for various activities as described throughout this disclosure, including being stored in data pools (which may be optimized by storing favorable data structures that provide the best operational results for a given environment), being presented in data marketplaces (such as being presented as the most effective structures for a given purpose), and the like.

In embodiments, a platform is provided having cloud-based, machine pattern analysis of state information from multiple analog industrial sensors to provide anticipated state information for an industrial system. In embodiments, the host processing system 112, such as disposed in the cloud, may include the state system 4020, which may be used to infer or calculate a current state or to determine an anticipated future state relating to the data collection system 102 or some aspect of the environment in which the data collection system 102 is disposed, such as the state of a machine, a component, a workflow, a process, an event (e.g., whether the event has occurred), an object, a person, a condition, a function, or the like. Maintaining state information allows the host processing system 112 to undertake analysis, such as in one or more analytic systems 4018, to determine contextual information, to apply semantic and conditional logic, and perform many other functions as enabled by the processing architecture 4024 described throughout this disclosure.

In embodiments, a platform is provided having cloud-based policy automation engine for IoT, with creation, deployment, and management of IoT devices. In embodiments, the platform 100 includes (or is integrated with, or included in) the host processing system 112, such as on a cloud platform, a policy automation engine 4032 for automating creation, deployment, and management of policies to IoT devices. Polices, which may include access policies, network usage policies, storage usage policies, bandwidth usage policies, device connection policies, security policies, rule-based policies, role-based polices, and others, may be required to govern the use of IoT devices. For example, as IoT devices may have many different network and data communications to other devices, policies may be needed to indicate to what devices a given device can connect, what data can be passed on, and what data can be received. As billions of devices with countless potential connections are expected to be deployed in the near future, it becomes impossible for humans to configure policies for IoT devices on a connection-by-connection basis. Accordingly, an intelligent policy automation engine 4032 may include cognitive features for creating, configuring, and managing policies. The policy automation engine 4032 may consume information about possible policies, such as from a policy database or library, which may include one or more public sources of available policies. These may be written in one or more conventional policy languages or scripts. The policy automation engine 4032 may apply the policies according to one or more models, such as based on the characteristics of a given device, machine, or environment. For example, a large machine, such as a machine for power generation, may include a policy that only a verifiably local controller can change certain parameters of the power generation, thereby avoiding a remote "takeover" by a hacker. This may be accomplished in turn by automatically finding and applying security policies that bar connection of the control infrastructure of the machine to the Internet, by requiring access authentication, or the like. The policy automation engine 4032 may include cognitive features, such as varying the application of policies, the configuration of policies, and the like (such as features based on state information from the state system 4020). The policy automation engine 4032 may take feedback, as from the learning feedback system 4012, such as based on one or more analytic results from the analytic system 4018, such as based on overall system results (such as the extent of security breaches, policy violations, and the like), local results, and analytic results. By variation and selection based on such feedback, the policy automation engine 4032 can, over time, learn to automatically create, deploy, configure, and manage policies across very large numbers of devices, such as managing policies for configuration of connections among IoT devices.

Methods and systems are disclosed herein for on-device sensor fusion and data storage for industrial IoT devices, including on-device sensor fusion and data storage for an industrial IoT device, where data from multiple sensors is multiplexed at the device for storage of a fused data stream. For example, pressure and temperature data may be multiplexed into a data stream that combines pressure and temperature in a time series, such as in a byte-like structure (where time, pressure, and temperature are bytes in a data structure, so that pressure and temperature remain linked in time, without requiring separate processing of the streams by outside systems), or by adding, dividing, multiplying, subtracting, or the like, such that the fused data can be stored on the device. Any of the sensor data types described throughout this disclosure can be fused in this manner and stored in a local data pool, in storage, or on an IoT device, such as a data collector, a component of a machine, or the like.

In embodiments, a platform is provided having on-device sensor fusion and data storage for industrial IoT devices. In embodiments, a cognitive system is used for a self-organizing storage system 4028 for the data collection system 102. Sensor data, and in particular analog sensor data, can consume large amounts of storage capacity, in particular where a data collector 102 has multiple sensor inputs onboard or from the local environment. Simply storing all the data indefinitely is not typically a favorable option, and even transmitting all of the data may strain bandwidth limitations, exceed bandwidth permissions (such as exceeding cellular data plan capacity), or the like. Accordingly, storage strategies are needed. These typically include capturing only portions of the data (such as snapshots), storing data for limited time periods, storing portions of the data (such as intermediate or abstracted forms), and the like. With many possible selections among these and other options, determining the correct storage strategy may be highly complex. In embodiments, the self-organizing storage system 4028 may use a cognitive system, based on learning feedback 4012, and use various metrics from the analytic system 4018 or other system of the host cognitive input selection system 4114, such as overall system metrics, analytic metrics, and local performance indicators. The self-organizing storage system 4028 may automatically vary storage parameters, such as storage locations (including local storage on the data collection system 102, storage on nearby data collection systems 102 (such as using peer-to-peer organization) and remote storage, such as network-based storage), storage amounts, storage duration, type of data stored (including individual sensors or input sources 116, as well as various combined or multiplexed data, such as selected under the cognitive input selection systems 4004, 4014), storage type (such as using RAM, Flash, or other short-term memory versus available hard drive space), storage organization (such as in raw form, in hierarchies, and the like), and others. Variation of the parameters may be undertaken with feedback, so that over time the data collection system 102 adapts its storage of data to optimize itself to the conditions of its environment, such as a particular industrial environment, in a way that results in its storing the data that is needed in the right amounts and of the right type for availability to users.

In embodiments, the local cognitive input selection system 4004 may organize fusion of data for various onboard sensors, external sensors (such as in the local environment) and other input sources 116 to the local collection system 102 into one or more fused data streams, such as using the multiplexer 4002 to create various signals that represent combinations, permutations, mixes, layers, abstractions, data-metadata combinations, and the like of the source analog and/or digital data that is handled by the data collection system 102. The selection of a particular fusion of sensors may be determined locally by the cognitive input selection system 4004, such as based on learning feedback from the learning feedback system 4012, such as various overall system, analytic system and local system results and metrics. In embodiments, the system may learn to fuse particular combinations and permutations of sensors, such as in order to best achieve correct anticipation of state, as indicated by feedback of the analytic system 4018 regarding its ability to predict future states, such as the various states handled by the state system 4020. For example, the input selection system 4004 may indicate selection of a sub-set of sensors among a larger set of available sensors, and the inputs from the selected sensors may be combined, such as by placing input from each of them into a byte of a defined, multi-bit data structure (such as a combination by taking a signal from each at a given sampling rate or time and placing the result into the byte structure, then collecting and processing the bytes over time), by multiplexing in the multiplexer 4002, such as a combination by additive mixing of continuous signals, and the like. Any of a wide range of signal processing and data processing techniques for combination and fusing may be used, including convolutional techniques, coercion techniques, transformation techniques, and the like. The particular fusion in question may be adapted to a given situation by cognitive learning, such as by having the cognitive input selection system 4004 learn, based on feedback 4012 from results (such as feedback conveyed by the analytic system 4018), such that the local data collection system 102 executes context-adaptive sensor fusion.

In embodiments, the analytic system 4018 may apply to any of a wide range of analytic techniques, including statistical and econometric techniques (such as linear regression analysis, use similarity matrices, heat map based techniques, and the like), reasoning techniques (such as Bayesian reasoning, rule-based reasoning, inductive reasoning, and the like), iterative techniques (such as feedback, recursion, feed-forward and other techniques), signal processing techniques (such as Fourier and other transforms), pattern recognition techniques (such as Kalman and other filtering techniques), search techniques, probabilistic techniques (such as random walks, random forest algorithms, and the like), simulation techniques (such as random walks, random forest algorithms, linear optimization and the like), and others. This may include computation of various statistics or measures. In embodiments, the analytic system 4018 may be disposed, at least in part, on a data collection system 102, such that a local analytic system can calculate one or more measures, such as measures relating to any of the items noted throughout this disclosure. For example, measures of efficiency, power utilization, storage utilization, redundancy, entropy, and other factors may be calculated onboard, so that the data collection 102 can enable various cognitive and learning functions noted throughout this disclosure without dependence on a remote (e.g., cloud-based) analytic system.

In embodiments, the host processing system 112, a data collection system 102, or both, may include, connect to, or integrate with, a self-organizing networking system 4020, which may comprise a cognitive system for providing machine-based, intelligent or organization of network utilization for transport of data in a data collection system, such as for handling analog and other sensor data, or other source data, such as among one or more local data collection systems 102 and a host system 112. This may include organizing network utilization for source data delivered to data collection systems, for feedback data, such as analytic data provided to or via a learning feedback system 4012, data for supporting a marketplace (such as described in connection with other embodiments), and output data provided via output interfaces and ports 4010 from one or more data collection systems 102.

Methods and systems are disclosed herein for a self-organizing data marketplace for industrial IoT data, including where available data elements are organized in the marketplace for consumption by consumers based on training a self-organizing facility with a training set and feedback from measures of marketplace success. A marketplace may be set up initially to make available data collected from one or more industrial environments, such as presenting data by type, by source, by environment, by machine, by one or more patterns, or the like (such as in a menu or hierarchy). The marketplace may vary the data collected, the organization of the data, the presentation of the data (including pushing the data to external sites, providing links, configuring APIs by which the data may be accessed, and the like), the pricing of the data, or the like, such as under machine learning, which may vary different parameters of any of the foregoing. The machine learning facility may manage all of these parameters by self-organization, such as by varying parameters over time (including by varying elements of the data types presented), the data sourced used to obtain each type of data, the data structures presented (such as byte-like structures, fused or multiplexed structures (such as representing multiple sensor types), and statistical structures (such as representing various mathematical products of sensor information), among others), the pricing for the data, where the data is presented, how the data is presented (such as by APIs, by links, by push messaging, and the like), how the data is stored, how the data is obtained, and the like. As parameters are varied, feedback may be obtained as to measures of success, such as number of views, yield (e.g., price paid) per access, total yield, per unit profit, aggregate profit, and many others, and the self-organizing machine learning facility may promote configurations that improve measures of success and demote configurations that do not, so that, over time, the marketplace is progressively configured to present favorable combinations of data types (e.g., those that provide robust prediction of anticipated states of particular industrial environments of a given type), from favorable sources (e.g., those that are reliable, accurate and low priced), with effective pricing (e.g., pricing that tends to provide high aggregate profit from the marketplace). The marketplace may include spiders, web crawlers, and the like to seek input data sources, such as finding data pools, connected IoT devices, and the like that publish potentially relevant data. These may be trained by human users and improved by machine learning in a manner similar to that described elsewhere in this disclosure.

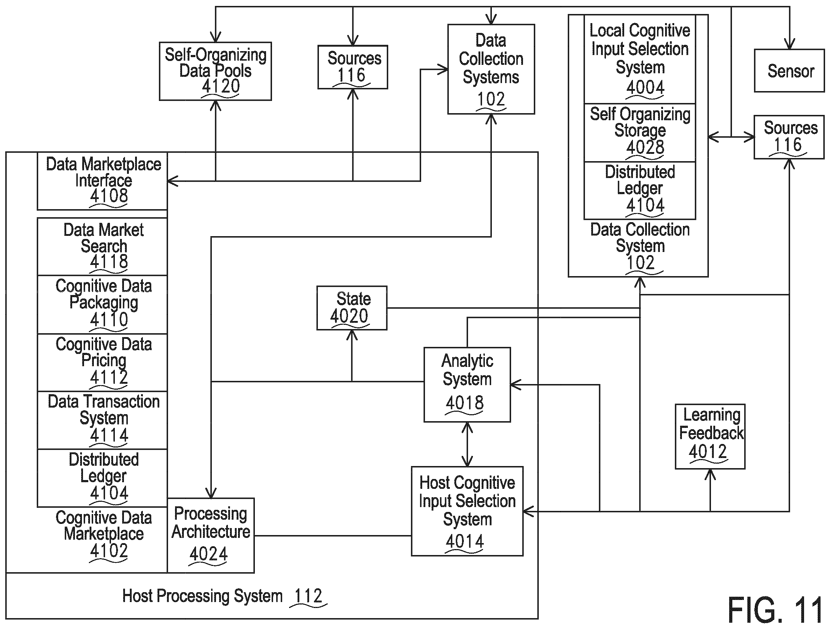

In embodiments, a platform is provided having a self-organizing data marketplace for industrial IoT data. Referring to Figure 11, in embodiments, a platform is provided having a cognitive data marketplace 4102, referred to in some cases as a self-organizing data marketplace, for data collected by one or more data collection systems 102 or for data from other sensors or input sources 116 that are located in various data collection environments, such as industrial environments. In addition to data collection systems 102, this may include data collected, handled or exchanged by IoT devices, such as cameras, monitors, embedded sensors, mobile devices, diagnostic devices and systems, instrumentation systems, telematics systems, and the like, such as for monitoring various parameters and features of machines, devices, components, parts, operations, functions, conditions, states, events, workflows and other elements (collectively encompassed by the term "states") of such environments. Data may also include metadata about any of the foregoing, such as describing data, indicating provenance, indicating elements relating to identity, access, roles, and permissions, providing summaries or abstractions of data, or otherwise augmenting one or more items of data to enable further processing, such as for extraction, transforming, loading, and processing data. Such data (such term including metadata except where context indicates otherwise) may be highly valuable to third parties, either as an individual element (such as the instance where data about the state of an environment can be used as a condition within a process) or in the aggregate (such as the instance where collected data, optionally over many systems and devices in different environments can be used to develop models of behavior, to train learning systems, or the like). As billions of IoT devices are deployed, with countless connections, the amount of available data will proliferate. To enable access and utilization of data, the cognitive data marketplace 4102 enables various components, features, services, and processes for enabling users to supply, find, consume, and transact in packages of data, such as batches of data, streams of data (including event streams), data from various data pools 4120, and the like. In embodiments, the cognitive data marketplace 4102 may be included in, connected to, or integrated with, one or more other components of a host processing architecture 4024 of a host processing system 112, such as a cloud-based system, as well as to various sensors, input sources 115, data collection systems 102 and the like. The cognitive data marketplace 4102 may include marketplace interfaces 4108, which may include one or more supplier interfaces by which data suppliers may make data available and one more consumer interfaces by which data may be found and acquired. The consumer interface may include an interface to a data market search system 4118, which may include features that enable a user to indicate what types of data a user wishes to obtain, such as by entering keywords in a natural language search interface that characterize data or metadata. The search interface can use various search and filtering techniques, including keyword matching, collaborative filtering (such as using known preferences or characteristics of the consumer to match to similar consumers and the past outcomes of those other consumers), ranking techniques (such as ranking based on success of past outcomes according to various metrics, such as those described in connection with other embodiments in this disclosure). In embodiments, a supply interface may allow an owner or supplier of data to supply the data in one or more packages to and through the cognitive data marketplace 4102, such as packaging batches of data, streams of data, or the like. The supplier may pre-package data, such as by providing data from a single input source 116, a single sensor, and the like, or by providing combinations, permutations, and the like (such as multiplexed analog data, mixed bytes of data from multiple sources, results of extraction, loading and transformation, results of convolution, and the like), as well as by providing metadata with respect to any of the foregoing. Packaging may include pricing, such as on a per-batch basis, on a streaming basis (such as subscription to an event feed or other feed or stream), on a per item basis, on a revenue share basis, or other basis. For data involving pricing, a data transaction system 4114 may track orders, delivery, and utilization, including fulfillment of orders. The transaction system 4114 may include rich transaction features, including digital rights management, such as by managing cryptographic keys that govern access control to purchased data, that govern usage (such as allowing data to be used for a limited time, in a limited domain, by a limited set of users or roles, or for a limited purpose). The transaction system 4114 may manage payments, such as by processing credit cards, wire transfers, debits, and other forms of consideration.

In embodiments, a cognitive data packaging system 4012 of the marketplace 4102 may use machine-based intelligence to package data, such as by automatically configuring packages of data in batches, streams, pools, or the like. In embodiments, packaging may be according to one or more rules, models, or parameters, such as by packaging or aggregating data that is likely to supplement or complement an existing model. For example, operating data from a group of similar machines (such as one or more industrial machines noted throughout this disclosure) may be aggregated together, such as based on metadata indicating the type of data or by recognizing features or characteristics in the data stream that indicate the nature of the data. In embodiments, packaging may occur using machine learning and cognitive capabilities, such as by learning what combinations, permutations, mixes, layers, and the like of input sources 116, sensors, information from data pools 4120 and information from data collection systems 102 are likely to satisfy user requirements or result in measures of success. Learning may be based on learning feedback 4012, such as learning based on measures determined in an analytic system 4018, such as system performance measures, data collection measures, analytic measures, and the like. In embodiments, success measures may be correlated to marketplace success measures, such as viewing of packages, engagement with packages, purchase or licensing of packages, payments made for packages, and the like. Such measures may be calculated in an analytic system 4018, including associating particular feedback measures with search terms and other inputs, so that the cognitive packaging system 4110 can find and configure packages that are designed to provide increased value to consumers and increased returns for data suppliers. In embodiments, the cognitive data packaging system 4110 can automatically vary packaging, such as using different combinations, permutations, mixes, and the like, and varying weights applied to given input sources, sensors, data pools and the like, using learning feedback 4012 to promote favorable packages and de-emphasize less favorable packages. This may occur using genetic programming and similar techniques that compare outcomes for different packages. Feedback may include state information from the state system 4020 (such as about various operating states, and the like), as well as about marketplace conditions and states, such as pricing and availability information for other data sources. Thus, an adaptive cognitive data packaging system 4110 is provided that automatically adapts to conditions to provide favorable packages of data for the marketplace 4102.

In embodiments, a cognitive data pricing system 4112 may be provided to set pricing for data packages. In embodiments, the data pricing system 4112 may use a set of rules, models, or the like, such as setting pricing based on supply conditions, demand conditions, pricing of various available sources, and the like. For example, pricing for a package may be configured to be set based on the sum of the prices of constituent elements (such as input sources, sensor data, or the like), or to be set based on a rule-based discount to the sum of prices for constituent elements, or the like. Rules and conditional logic may be applied, such as rules that factor in cost factors (such as bandwidth and network usage, peak demand factors, scarcity factors, and the like), rules that factor in utilization parameters (such as the purpose, domain, user, role, duration, or the like for a package) and many others. In embodiments, the cognitive data pricing system 4112 may include fully cognitive, intelligent features, such as using genetic programming including automatically varying pricing and tracking feedback on outcomes. Outcomes on which tracking feedback may be based include various financial yield metrics, utilization metrics and the like that may be provided by calculating metrics in an analytic system 4018 on data from the data transaction system 4114.

Methods and systems are disclosed herein for self-organizing data pools which may include self-organization of data pools based on utilization and/or yield metrics, including utilization and/or yield metrics that are tracked for a plurality of data pools. The data pools may initially comprise unstructured or loosely structured pools of data that contain data from industrial environments, such as sensor data from or about industrial machines or components. For example, a data pool might take streams of data from various machines or components in an environment, such as turbines, compressors, batteries, reactors, engines, motors, vehicles, pumps, rotors, axles, bearings, valves, and many others, with the data streams containing analog and/or digital sensor data (of a wide range of types), data published about operating conditions, diagnostic and fault data, identifying data for machines or components, asset tracking data, and many other types of data. Each stream may have an identifier in the pool, such as indicating its source, and optionally its type. The data pool may be accessed by external systems, such as through one or more interfaces or APIs (e.g., RESTful APIs), or by data integration elements (such as gateways, brokers, bridges, connectors, or the like), and the data pool may use similar capabilities to get access to available data streams. A data pool may be managed by a self-organizing machine learning facility, which may configure the data pool, such as by managing what sources are used for the pool, managing what streams are available, and managing APIs or other connections into and out of the data pool. The self-organization may take feedback such as based on measures of success that may include measures of utilization and yield. The measures of utilization and yield that may include may account for the cost of acquiring and/or storing data, as well as the benefits of the pool, measured either by profit or by other measures that may include user indications of usefulness, and the like. For example, a self-organizing data pool might recognize that chemical and radiation data for an energy production environment are regularly accessed and extracted, while vibration and temperature data have not been used, in which case the data pool might automatically reorganize, such as by ceasing storage of vibration and/or temperature data, or by obtaining better sources of such data. This automated reorganization can also apply to data structures, such as promoting different data types, different data sources, different data structures, and the like, through progressive iteration and feedback.

In embodiments, a platform is provided having self-organization of data pools based on utilization and/or yield metrics. In embodiments, the data pools 4020 may be self-organizing data pools 4020, such as being organized by cognitive capabilities as described throughout this disclosure. The data pools 4020 may self-organize in response to learning feedback 4012, such as based on feedback of measures and results, including calculated in an analytic system 4018. Organization may include determining what data or packages of data to store in a pool (such as representing particular combinations, permutations, aggregations, and the like), the structure of such data (such as in flat, hierarchical, linked, or other structures), the duration of storage, the nature of storage media (such as hard disks, flash memory, SSDs, network-based storage, or the like), the arrangement of storage bits, and other parameters. The content and nature of storage may be varied, such that a data pool 4020 may learn and adapt, such as based on states of the host system 112, one or more data collection systems 102, storage environment parameters (such as capacity, cost, and performance factors), data collection environment parameters, marketplace parameters, and many others. In embodiments, pools 4020 may learn and adapt, such as by variation of the above and other parameters in response to yield metrics (such as return on investment, optimization of power utilization, optimization of revenue, and the like).

Methods and systems are disclosed herein for training AI models based on industry-specific feedback, including training an AI model based on industry-specific feedback that reflects a measure of utilization, yield, or impact, and where the AI model operates on sensor data from an industrial environment. As noted above, these models may include operating models for industrial environments, machines, workflows, models for anticipating states, models for predicting fault and optimizing maintenance, models for self-organizing storage (on devices, in data pools and/or in the cloud), models for optimizing data transport (such as for optimizing network coding, network-condition-sensitive routing, and the like), models for optimizing data marketplaces, and many others.

In embodiments, a platform is provided having training AI models based on industry-specific feedback. In embodiments, the various embodiments of cognitive systems disclosed herein may take inputs and feedback from industry-specific and domain-specific sources 116 (such as relating to optimization of specific machines, devices, components, processes, and the like). Thus, learning and adaptation of storage organization, network usage, combination of sensor and input data, data pooling, data packaging, data pricing, and other features (such as for a marketplace 4102 or for other purposes of the host processing system 112) may be configured by learning on the domain-specific feedback measures of a given environment or application, such as an application involving IoT devices (such as an industrial environment). This may include optimization of efficiency (such as in electrical, electromechanical, magnetic, physical, thermodynamic, chemical and other processes and systems), optimization of outputs (such as for production of energy, materials, products, services and other outputs), prediction, avoidance and mitigation of faults (such as in the aforementioned systems and processes), optimization of performance measures (such as returns on investment, yields, profits, margins, revenues and the like), reduction of costs (including labor costs, bandwidth costs, data costs, material input costs, licensing costs, and many others), optimization of benefits (such as relating to safety, satisfaction, health), optimization of work flows (such as optimizing time and resource allocation to processes), and others.

Methods and systems are disclosed herein for a self-organized swarm of industrial data collectors, including a self-organizing swarm of industrial data collectors that organize among themselves to optimize data collection based on the capabilities and conditions of the members of the swarm. Each member of the swarm may be configured with intelligence, and the ability to coordinate with other members. For example, a member of the swarm may track information about what data other members are handling, so that data collection activities, data storage, data processing, and data publishing can be allocated intelligently across the swarm, taking into account conditions of the environment, capabilities of the members of the swarm, operating parameters, rules (such as from a rules engine that governs the operation of the swarm), and current conditions of the members. For example, among four collectors, one that has relatively low current power levels (such as a low battery), might be temporarily allocated the role of publishing data, because it may receive a dose of power from a reader or interrogation device (such as an RFID reader) when it needs to publish the data. A second collector with good power levels and robust processing capability might be assigned more complex functions, such as processing data, fusing data, organizing the rest of the swarm (including self-organization under machine learning, such that the swarm is optimized over time, including by adjusting operating parameters, rules, and the like based on feedback), and the like. A third collector in the swarm with robust storage capabilities might be assigned the task of collecting and storing a category of data, such as vibration sensor data, that consumes considerable bandwidth. A fourth collector in the swarm, such as one with lower storage capabilities, might be assigned the role of collecting data that can usually be discarded, such as data on current diagnostic conditions, where only data on faults needs to be maintained and passed along. Members of a swarm may connect by peer-to-peer relationships by using a member as a "master" or "hub," or by having them connect in a series or ring, where each member passes along data (including commands) to the next, and is aware of the nature of the capabilities and commands that are suitable for the preceding and/or next member. The swarm may be used for allocation of storage across it (such as using memory of each memory as an aggregate data store. In these examples, the aggregate data store may support a distributed ledger, which may store transaction data, such as for transactions involving data collected by the swarm, transactions occurring in the industrial environment, or the like. In embodiments, the transaction data may also include data used to manage the swarm, the environment, or a machine or components thereof. The swarm may self-organize, either by machine learning capability disposed on one or more members of the swarm, or based on instructions from an external machine learning facility, which may optimize storage, data collection, data processing, data presentation, data transport, and other functions based on managing parameters that are relevant to each. The machine learning facility may start with an initial configuration and vary parameters of the swarm relevant to any of the foregoing (also including varying the membership of the swarm), such as iterating based on feedback to the machine learning facility regarding measures of success (such as utilization measures, efficiency measures, measures of success in prediction or anticipation of states, productivity measures, yield measures, profit measures, and others). Over time, the swarm may be optimized to a favorable configuration to achieve the desired measure of success for an owner, operator, or host of an industrial environment or a machine, component, or process thereof.

The swarm 4202 may be organized based on a hierarchical organization (such as where a master data collector 102 organizes and directs activities of one or more subservient data collectors 102), a collaborative organization (such as where decision-making for the organization of the swarm 4202 is distributed among the data collectors 102 (such as using various models for decision-making, such as voting systems, points systems, least-cost routing systems, prioritization systems, and the like), and the like.) In embodiments, one or more of the data collectors 102 may have mobility capabilities, such as in cases where a data collector is disposed on or in a mobile robot, drone, mobile submersible, or the like, so that organization may include the location and positioning of the data collectors 102. Data collection systems 102 may communicate with each other and with the host processing system 112, including sharing an aggregate allocated storage space involving storage on or accessible to one or more of the collectors (which in embodiment may be treated as a unified storage space even if physically distributed, such as using virtualization capabilities). Organization may be automated based on one or more rules, models, conditions, processes, or the like (such as embodied or executed by conditional logic), and organization may be governed by policies, such as handled by the policy engine. Rules may be based on industry, application- and domain-specific objects, classes, events, workflows, processes, and systems, such as by setting up the swarm 4202 to collect selected types of data at designated places and times, such as coordinated with the foregoing. For example, the swarm 4202 may assign data collectors 102 to serially collect diagnostic, sensor, instrumentation and/or telematic data from each of a series of machines that execute an industrial process (such as a robotic manufacturing process), such as at the time and location of the input to and output from each of those machines. In embodiments, self-organization may be cognitive, such as where the swarm varies one or more collection parameters and adapts the selection of parameters, weights applied to the parameters, or the like, over time. In examples, this may be in response to learning and feedback, such as from the learning feedback system 4012 that may be based on various feedback measures that may be determined by applying the analytic system 4018 (which in embodiments may reside on the swarm 4202, the host processing system 112, or a combination thereof) to data handled by the swarm 4202 or to other elements of the various embodiments disclosed herein (including marketplace elements and others). Thus, the swarm 4202 may display adaptive behavior, such as adapting to the current state 4020 or an anticipated state of its environment (accounting for marketplace behavior), behavior of various objects (such as IoT devices, machines, components, and systems), processes (including events, states, workflows, and the like), and other factors at a given time. Parameters that may be varied in a process of variation (such as in a neural net, self-organizing map, or the like), selection, promotion, or the like (such as those enabled by genetic programming or other AI-based techniques). Parameters that may be managed, varied, selected and adapted by cognitive, machine learning may include storage parameters (location, type, duration, amount, structure and the like across the swarm 4202), network parameters (such as how the swarm 4202 is organized, such as in mesh, peer-to-peer, ring, serial, hierarchical and other network configurations as well as bandwidth utilization, data routing, network protocol selection, network coding type, and other networking parameters), security parameters (such as settings for various security applications and services), location and positioning parameters (such as routing movement of mobile data collectors 102 to locations, positioning and orienting collectors 102 and the like relative to points of data acquisition, relative to each other, and relative to locations where network availability may be favorable, among others), input selection parameters (such as input selection among sensors, input sources 116 and the like for each collector 102 and for the aggregate collection), data combination parameters (such as those for sensor fusion, input combination, multiplexing, mixing, layering, convolution, and other combinations), power parameters (such as parameters based on power levels and power availability for one or more collectors 102 or other objects, devices, or the like), states (including anticipated states and conditions of the swarm 4202, individual collection systems 102, the host processing system 112 or one or more objects in an environment), events, and many others. Feedback may be based on any of the kinds of feedback described herein, such that over time the swarm may adapt to its current and anticipated situation to achieve a wide range of desired objectives.

Methods and systems are disclosed herein for an industrial IoT distributed ledger, including a distributed ledger supporting the tracking of transactions executed in an automated data marketplace for industrial IoT data. A distributed ledger may distribute storage across devices, using a secure protocol, such as those used for cryptocurrencies (such as the Blockchain™ protocol used to support the Bitcoin™ currency). A ledger or similar transaction record, which may comprise a structure where each successive member of a chain stores data for previous transactions, and a competition can be established to determine which of alternative data stored data structures is "best" (such as being most complete), can be stored across data collectors, industrial machines or components, data pools, data marketplaces, cloud computing elements, servers, and/or on the IT infrastructure of an enterprise (such as an owner, operator or host of an industrial environment or of the systems disclosed herein). The ledger or transaction may be optimized by machine learning, such as to provide storage efficiency, security, redundancy, or the like.

In embodiments, the cognitive data marketplace 4102 may use a secure architecture for tracking and resolving transactions, such as a distributed ledger 4004, wherein transactions in data packages are tracked in a chained, distributed data structure, such as a Blockchain™, allowing forensic analysis and validation where individual devices store a portion of the ledger representing transactions in data packages. The distributed ledger 4004 may be distributed to IoT devices, to data pools 4020, to data collection systems 102, and the like, so that transaction information can be verified without reliance on a single, central repository of information. The transaction system 4114 may be configured to store data in the distributed ledger 4004 and to retrieve data from it (and from constituent devices) in order to resolve transactions. Thus, a distributed ledger 4004 for handling transactions in data, such as for packages of IoT data, is provided. In embodiments, the self-organizing storage system 4028 may be used for optimizing storage of distributed ledger data, as well as for organizing storage of packages of data, such as IoT data, that can be presented in the marketplace 4102.

Methods and systems are disclosed herein for a network-sensitive collector, including a network condition-sensitive, self-organizing, multi-sensor data collector that can optimize based on bandwidth, quality of service, pricing and/or other network conditions. Network sensitivity can include awareness of the price of data transport (such as allowing the system to pull or push data during off-peak periods or within the available parameters of paid data plans), the quality of the network (such as to avoid periods where errors are likely), the quality of environmental conditions (such as delaying transmission until signal quality is good, such as when a collector emerges from a shielded environment, avoiding wasting use of power when seeking a signal when shielded, such as by large metal structures typically of industrial environments), and the like.

Methods and systems are disclosed herein for a remotely organized universal data collector that can power up and down sensor interfaces based on need and/or conditions identified in an industrial data collection environment. For example, interfaces can recognize what sensors are available and interfaces and/or processors can be turned on to take input from such sensors, including hardware interfaces that allow the sensors to plug in to the data collector, wireless data interfaces (such as where the collector can ping the sensor, optionally providing some power via an interrogation signal), and software interfaces (such as for handling particular types of data). Thus, a collector that is capable of handling various kinds of data can be configured to adapt to the particular use in a given environment. In embodiments, configuration may be automatic or under machine learning, which may improve configuration by optimizing parameters based on feedback measures over time.

Methods and systems are disclosed herein for self-organizing storage for a multi-sensor data collector, including self-organizing storage for a multi-sensor data collector for industrial sensor data. Self-organizing storage may allocate storage based on application of machine learning, which may improve storage configuration based on feedback measure over time. Storage may be optimized by configuring what data types are used (e.g., byte-like structures, structures representing fused data from multiple sensors, structures representing statistics or measures calculated by applying mathematical functions on data, and the like), by configuring compression, by configuring data storage duration, by configuring write strategies (such as by striping data across multiple storage devices, using protocols where one device stores instructions for other devices in a chain, and the like), and by configuring storage hierarchies, such as by providing pre-calculated intermediate statistics to facilitate more rapid access to frequently accessed data items. Thus, highly intelligent storage systems may be configured and optimized, based on feedback, over time.

Methods and systems are disclosed herein for self-organizing network coding for a multi-sensor data network, including self-organizing network coding for a data network that transports data from multiple sensors in an industrial data collection environment. Network coding, including random linear network coding, can enable highly efficient and reliable transport of large amounts of data over various kinds of networks. Different network coding configurations can be selected, based on machine learning, to optimize network coding and other network transport characteristics based on network conditions, environmental conditions, and other factors, such as the nature of the data being transported, environmental conditions, operating conditions, and the like (including by training a network coding selection model over time based on feedback of measures of success, such as any of the measures described herein).

In embodiments, a platform is provided having a self-organizing network coding for multi-sensor data network. A cognitive system may vary one or more parameters for networking, such as network type selection (e.g., selecting among available local, cellular, satellite, Wi-Fi, Bluetooth™, NFC, Zigbee® and other networks), network selection (such as selecting a specific network, such as one that is known to have desired security features), network coding selection (such as selecting a type of network coding for efficient transport[such as random linear network coding, fixed coding, and others]), network timing selection (such as configuring delivery based on network pricing conditions, traffic and the like), network feature selection (such as selecting cognitive features, security features, and the like), network conditions (such as network quality based on current environmental or operation conditions), network feature selection (such as enabling available authentication, permission and similar systems), network protocol selection (such as among HTTP, IP, TCP/IP, cellular, satellite, serial, packet, streaming, and many other protocols), and others. Given bandwidth constraints, price variations, sensitivity to environmental factors, security concerns, and the like, selecting the optimal network configuration can be highly complex and situation dependent. The self-organizing networking system 4030 may vary combinations and permutations of these parameters while taking input from a learning feedback system 4012 such as using information from the analytic system 4018 about various measures of outcomes. In the many examples, outcomes may include overall system measures, analytic success measures, and local performance indicators. In embodiments, input from a learning feedback system 4012 may include information from various sensors and input sources 116, information from the state system 4020 about states (such as events, environmental conditions, operating conditions, and many others, or other information) or taking other inputs. By variation and selection of alternative configurations of networking parameters in different states, the self-organizing networking system may find configurations that are well-adapted to the environment that is being monitored or controlled by the host system 112, such as the instance where one or more data collection systems 102 are located and that are well-adapted to emerging network conditions. Thus, a self-organizing, network-condition-adaptive data collection system is provided.

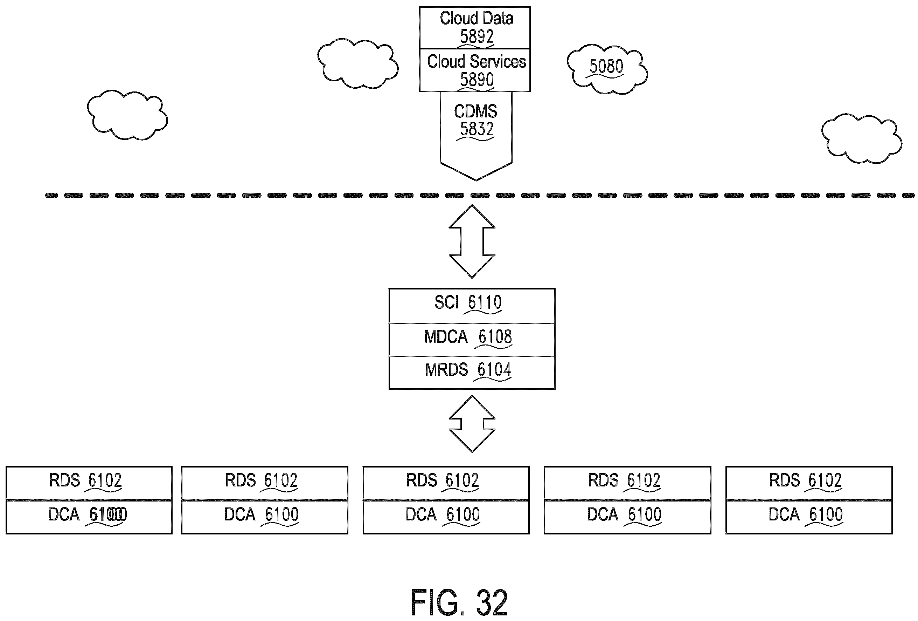

Referring to Figure 32, a data collection system 102 may have one or more output interfaces and/or ports 4010. These may include network ports and connections, application programming interfaces, and the like. Methods and systems are disclosed herein for a haptic or multi-sensory user interface, including a wearable haptic or multi-sensory user interface for an industrial sensor data collector, with vibration, heat, electrical, and/or sound outputs. For example, an interface may, based on a data structure configured to support the interface, be set up to provide a user with input or feedback, such as based on data from sensors in the environment. For example, if a fault condition based on a vibration data (such as resulting from a bearing being worn down, an axle being misaligned, or a resonance condition between machines) is detected, it can be presented in a haptic interface by vibration of an interface, such as shaking a wrist-worn device. Similarly, thermal data indicating overheating could be presented by warming or cooling a wearable device, such as while a worker is working on a machine and cannot necessarily look at a user interface. Similarly, electrical or magnetic data may be presented by a buzzing, and the like, such as to indicate presence of an open electrical connection or wire, etc. That is, a multi-sensory interface can intuitively help a user (such as a user with a wearable device) get a quick indication of what is going on in an environment, with the wearable interface having various modes of interaction that do not require a user to have eyes on a graphical UI, which may be difficult or impossible in many industrial environments where a user needs to keep an eye on the environment.

In embodiments, a platform is provided having a wearable haptic user interface for an industrial sensor data collector, with vibration, heat, electrical, and/or sound outputs. In embodiments, a haptic user interface 4302 is provided as an output for a data collection system 102, such as a system for handling and providing information for vibration, heat, electrical, and/or sound outputs, such as to one or more components of the data collection system 102 or to another system, such as a wearable device, mobile phone, or the like. A data collection system 102 may be provided in a form factor suitable for delivering haptic input to a user, such as vibration, warming or cooling, buzzing, or the like, such as input disposed in headgear, an armband, a wristband or watch, a belt, an item of clothing, a uniform, or the like. In such cases, data collection systems 102 may be integrated with gear, uniforms, equipment, or the like worn by users, such as individuals responsible for operating or monitoring an industrial environment. In embodiments, signals from various sensors or input sources (or selective combinations, permutations, mixes, and the like, as managed by one or more of the cognitive input selection systems 4004, 4014) may trigger haptic feedback. For example, if a nearby industrial machine is overheating, the haptic interface may alert a user by warming up, or by sending a signal to another device (such as a mobile phone) to warm up. If a system is experiencing unusual vibrations, the haptic interface may vibrate. Thus, through various forms of haptic input, a data collection system 102 may inform users of the need to attend to one or more devices, machines, or other factors (such as those in an industrial environment) without requiring them to read messages or divert their visual attention away from the task at hand. The haptic interface, and selection of what outputs should be provided, may be considered in the cognitive input selection systems 4004, 4014. For example, user behavior (such as responses to inputs) may be monitored and analyzed in an analytic system 4018, and feedback may be provided through the learning feedback system 4012, so that signals may be provided based on the right collection or package of sensors and inputs, at the right time and in the right manner, to optimize the effectiveness of the haptic system 4202. This may include rule-based or model-based feedback (such as providing outputs that correspond in some logical fashion to the source data that is being conveyed). In embodiments, a cognitive haptic system may be provided, where selection of inputs or triggers for haptic feedback, selection of outputs, timing, intensity levels, durations, and other parameters (or weights applied to them) may be varied in a process of variation, promotion, and selection (such as using genetic programming) with feedback based on real world responses to feedback in actual situations or based on results of simulation and testing of user behavior. Thus, an adaptive haptic interface for a data collection system 102 is provided, which may learn and adapt feedback to satisfy requirements and to optimize the impact on user behavior, such as for overall system outcomes, data collection outcomes, analytic outcomes, and the like.

Methods and systems are disclosed herein for a presentation layer for AR/VR industrial glasses, where heat map elements are presented based on patterns and/or parameters in collected data. Methods and systems are disclosed herein for condition-sensitive, self-organized tuning of AR/VR interfaces based on feedback metrics and/or training in industrial environments. In embodiments, any of the data, measures, and the like described throughout this disclosure can be presented by visual elements, overlays, and the like for presentation in the AR/VR interfaces, such as in industrial glasses, on AR/VR interfaces on smart phones or tablets, on AR/VR interfaces on data collectors (which may be embodied in smart phones or tablets), on displays located on machines or components, and/or on displays located in industrial environments.

In embodiments, a platform is provided having heat maps displaying collected data for AR/VR. In embodiments, a platform is provided having heat maps 4204 displaying collected data from a data collection system 102 for providing input to an AR/VR interface 4208. In embodiments, the heat map interface 4304 is provided as an output for a data collection system 102, such as for handling and providing information for visualization of various sensor data and other data (such as map data, analog sensor data, and other data), such as to one or more components of the data collection system 102 or to another system, such as a mobile device, tablet, dashboard, computer, AR/VR device, or the like. A data collection system 102 may be provided in a form factor suitable for delivering visual input to a user, such as the presentation of a map that includes indicators of levels of analog and digital sensor data (such as data indicating levels of rotation, vibration, heating or cooling, pressure, and many other conditions). In such cases, data collection systems 102 may be integrated with equipment, or the like that are used by individuals responsible for operating or monitoring an industrial environment. In embodiments, signals from various sensors or input sources (or selective combinations, permutations, mixes, and the like, as managed by one or more of the cognitive input selection systems 4004, 4014) may provide input data to a heat map. Coordinates may include real world location coordinates (such as geolocation or location on a map of an environment), as well as other coordinates, such as time-based coordinates, frequency-based coordinates, or other coordinates that allow for representation of analog sensor signals, digital signals, input source information, and various combinations, in a map-based visualization, such that colors may represent varying levels of input along the relevant dimensions. For example, if a nearby industrial machine is overheating, the heat map interface may alert a user by showing a machine in bright red. If a system is experiencing unusual vibrations, the heat map interface may show a different color for a visual element for the machine, or it may cause an icon or display element representing the machine to vibrate in the interface, calling attention to the element. Clicking, touching, or otherwise interacting with the map can allow a user to drill down and see underlying sensor or input data that is used as an input to the heat map display. Thus, through various forms of display, a data collection system 102 may inform users of the need to attend to one or more devices, machines, or other factors, such as those in an industrial environment, without requiring them to read text-based messages or input. The heat map interface, and selection of what outputs should be provided, may be considered in the cognitive input selection systems 4004, 4014. For example, user behavior (such as responses to inputs or displays) may be monitored and analyzed in an analytic system 4018, and feedback may be provided through the learning feedback system 4012, so that signals may be provided based on the right collection or package of sensors and inputs, at the right time and in the right manner, to optimize the effectiveness of the heat map UI 4304. This may include rule-based or model-based feedback (such as feedback providing outputs that correspond in some logical fashion to the source data that is being conveyed). In embodiments, a cognitive heat map system may be provided, where selection of inputs or triggers for heat map displays, selection of outputs, colors, visual representation elements, timing, intensity levels, durations and other parameters (or weights applied to them) may be varied in a process of variation, promotion and selection (such as selection using genetic programming) with feedback based on real world responses to feedback in actual situations or based on results of simulation and testing of user behavior. Thus, an adaptive heat map interface for a data collection system 102, or data collected thereby 102, or data handled by a host processing system 112, is provided, which may learn and adapt feedback to satisfy requirements and to optimize the impact on user behavior and reaction, such as for overall system outcomes, data collection outcomes, analytic outcomes, and the like.

In embodiments, a platform is provided having automatically tuned AR/VR visualization of data collected by a data collector. In embodiments, a platform is provided having an automatically tuned AR/VR visualization system 4308 for visualization of data collected by a data collection system 102, such as the case where the data collection system 102 has an AR/VR interface 4208 or provides input to an AR/VR interface 4308 (such as a mobile phone positioned in a virtual reality or AR headset, a set of AR glasses, or the like). In embodiments, the AR/VR system 4308 is provided as an output interface of a data collection system 102, such as a system for handling and providing information for visualization of various sensor data and other data (such as map data, analog sensor data, and other data), such as to one or more components of the data collection system 102 or to another system, such as a mobile device, tablet, dashboard, computer, AR/VR device, or the like. A data collection system 102 may be provided in a form factor suitable for delivering AR or VR visual, auditory, or other sensory input to a user, such as by presenting one or more displays such as 3D-realistic visualizations, objects, maps, camera overlays, or other overlay elements, maps and the like that include or correspond to indicators of levels of analog and digital sensor data (such as data indicating levels of rotation, vibration, heating or cooling, pressure and many other conditions, to input sources 116, or the like). In such cases, data collection systems 102 may be integrated with equipment, or the like that are used by individuals responsible for operating or monitoring an industrial environment.

In embodiments, signals from various sensors or input sources (or selective combinations, permutations, mixes, and the like as managed by one or more of the cognitive input selection systems 4004, 4014) may provide input data to populate, configure, modify, or otherwise determine the AR/VR element. Visual elements may include a wide range of icons, map elements, menu elements, sliders, toggles, colors, shapes, sizes, and the like, for representation of analog sensor signals, digital signals, input source information, and various combinations. In many examples, colors, shapes, and sizes of visual overlay elements may represent varying levels of input along the relevant dimensions for a sensor or combination of sensors. In further examples, if a nearby industrial machine is overheating, an AR element may alert a user by showing an icon representing that type of machine in flashing red color in a portion of the display of a pair of AR glasses. If a system is experiencing unusual vibrations, a virtual reality interface showing visualization of the components of the machine (such as an overlay of a camera view of the machine with 3D visualization elements) may show a vibrating component in a highlighted color, with motion, or the like, to ensure the component stands out in a virtual reality environment being used to help a user monitor or service the machine. Clicking, touching, moving eyes toward, or otherwise interacting with a visual element in an AR/VR interface may allow a user to drilldown and see underlying sensor or input data that is used as an input to the display. Thus, through various forms of display, a data collection system 102 may inform users of the need to attend to one or more devices, machines, or other factors (such as in an industrial environment), without requiring them to read text-based messages or input or divert attention from the applicable environment (whether it is a real environment with AR features or a virtual environment, such as for simulation, training, or the like).

The AR/VR output interface 4208, and selection and configuration of what outputs or displays should be provided, may be handled in the cognitive input selection systems 4004, 4014. For example, user behavior (such as responses to inputs or displays) may be monitored and analyzed in an analytic system 4018, and feedback may be provided through the learning feedback system 4012, so that AR/VR display signals may be provided based on the right collection or package of sensors and inputs, at the right time and in the right manner, to optimize the effectiveness of the AR/VR UI 4308. This may include rule-based or model-based feedback (such as providing outputs that correspond in some logical fashion to the source data that is being conveyed). In embodiments, a cognitively tuned AR/VR interface control system 4308 may be provided, where selection of inputs or triggers for AR/VR display elements, selection of outputs (such as colors, visual representation elements, timing, intensity levels, durations and other parameters [or weights applied to them]) and other parameters of a VR/AR environment may be varied in a process of variation, promotion and selection (such as the use of genetic programming) with feedback based on real world responses in actual situations or based on results of simulation and testing of user behavior. Thus, an adaptive, tuned AR/VR interface for a data collection system 102, or data collected thereby 102, or data handled by a host processing system 112, is provided, which may learn and adapt feedback to satisfy requirements and to optimize the impact on user behavior and reaction, such as for overall system outcomes, data collection outcomes, analytic outcomes, and the like.

As noted above, methods and systems are disclosed herein for continuous ultrasonic monitoring, including providing continuous ultrasonic monitoring of rotating elements and bearings of an energy production facility. Embodiments include using continuous ultrasonic monitoring of an industrial environment as a source for a cloud-deployed pattern recognizer. Embodiments include using continuous ultrasonic monitoring to provide updated state information to a state machine that is used as an input to a cloud-deployed pattern recognizer. Embodiments include making available continuous ultrasonic monitoring information to a user based on a policy declared in a policy engine. Embodiments include storing continuous ultrasonic monitoring data with other data in a fused data structure on an industrial sensor device. Embodiments include making a stream of continuous ultrasonic monitoring data from an industrial environment available as a service from a data marketplace. Embodiments include feeding a stream of continuous ultrasonic monitoring data into a self-organizing data pool. Embodiments include training a machine learning model to monitor a continuous ultrasonic monitoring data stream where the model is based on a training set created from human analysis of such a data stream, and is improved based on data collected on performance in an industrial environment.

Embodiments include a swarm of data collectors that include at least one data collector for continuous ultrasonic monitoring of an industrial environment and at least one other type of data collector. Embodiments include using a distributed ledger to store time-series data from continuous ultrasonic monitoring across multiple devices. Embodiments include collecting a stream of continuous ultrasonic data in a self-organizing data collector, a network-sensitive data collector, a remotely organized data collector, a data collector having self-organized storage and the like. Embodiments include using self-organizing network coding to transport a stream of ultrasonic data collected from an industrial environment. Embodiments include conveying an indicator of a parameter of a continuously collected ultrasonic data stream via an interface where the interface is one of a sensory interface of a wearable device, a heat map visual interface of a wearable device, an interface that operates with self-organized tuning of the interface layer, and the like.

As noted above, methods and systems are disclosed herein for cloud-based, machine pattern recognition based on fusion of remote analog industrial sensors. Embodiments include taking input from a plurality of analog sensors disposed in an industrial environment, multiplexing the sensors into a multiplexed data stream, feeding the data stream into a cloud-deployed machine learning facility, and training a model of the machine learning facility to recognize a defined pattern associated with the industrial environment. Embodiments include using a cloud-based pattern recognizer on input states from a state machine that characterizes states of an industrial environment. Embodiments include deploying policies by a policy engine that govern what data can be used by what users and for what purpose in cloud-based, machine learning. Embodiments include using a cloud-based platform to identify patterns in data across a plurality of data pools that contain data published from industrial sensors. Embodiments include training a model to identify preferred sensor sets to diagnose a condition of an industrial environment, where a training set is created by a human user and the model is improved based on feedback from data collected about conditions in an industrial environment.

Embodiments include a swarm of data collectors that is governed by a policy that is automatically propagated through the swarm. Embodiments include using a distributed ledger to store sensor fusion information across multiple devices. Embodiments include feeding input from a set of data collectors into a cloud-based pattern recognizer that uses data from multiple sensors for an industrial environment. The data collectors may be self-organizing data collectors, network-sensitive data collectors, remotely organized data collectors, a set of data collectors having self-organized storage, and the like. Embodiments include a system for data collection in an industrial environment with self-organizing network coding for data transport of data fused from multiple sensors in the environment. Embodiments include conveying information formed by fusing inputs from multiple sensors in an industrial data collection system in an interface such as a multi-sensory interface, a heat map interface, an interface that operates with self-organized tuning of the interface layer, and the like.

As noted above, methods and systems are disclosed herein for cloud-based, machine pattern analysis of state information from multiple analog industrial sensors to provide anticipated state information for an industrial system. Embodiments include using a policy engine to determine what state information can be used for cloud-based machine analysis. Embodiments include feeding inputs from multiple devices that have fused and on-device storage of multiple sensor streams into a cloud-based pattern recognizer to determine an anticipated state of an industrial environment. Embodiments include making an output, such as anticipated state information, from a cloud-based machine pattern recognizer that analyzes fused data from remote, analog industrial sensors available as a data service in a data marketplace. Embodiments include using a cloud-based pattern recognizer to determine an anticipated state of an industrial environment based on data collected from data pools that contain streams of information from machines in the environment. Embodiments include training a model to identify preferred state information to diagnose a condition of an industrial environment, where a training set is created by a human user and the model is improved based on feedback from data collected about conditions in an industrial environment. Embodiments include a swarm of data collectors that feeds a state machine that maintains current state information for an industrial environment. Embodiments include using a distributed ledger to store historical state information for fused sensor states a self-organizing data collector that feeds a state machine that maintains current state information for an industrial environment. Embodiments include a data collector that feeds a state machine that maintains current state information for an industrial environment where the data collector may be a network sensitive data collector, a remotely organized data collector, a data collector with self-organized storage, and the like. Embodiments include a system for data collection in an industrial environment with self-organizing network coding for data transport and maintains anticipated state information for the environment. Embodiments include conveying anticipated state information determined by machine learning in an industrial data collection system in an interface where the interface may be one or more of a multisensory interface, a heat map interface an interface that operates with self-organized tuning of the interface layer, and the like.

As noted above, methods and systems are disclosed herein for a cloud-based policy automation engine for IoT, with creation, deployment, and management of IoT devices, including a cloud-based policy automation engine for IoT, enabling creation, deployment and management of policies that apply to IoT devices. Policies can relate to data usage to an on-device storage system that stores fused data from multiple industrial sensors, or what data can be provided to whom in a self-organizing marketplace for IoT sensor data. Policies can govern how a self-organizing swarm or data collector should be organized for a particular industrial environment, how a network-sensitive data collector should use network bandwidth for a particular industrial environment, how a remotely organized data collector should collect, and make available, data relating to a specified industrial environment, or how a data collector should self-organize storage for a particular industrial environment. Policies can be deployed across a set of self-organizing pools of data that contain data streamed from industrial sensing devices to govern use of data from the pools or stored on a device that governs use of storage capabilities of the device for a distributed ledger. Embodiments include training a model to determine what policies should be deployed in an industrial data collection system. Embodiments include a system for data collection in an industrial environment with a policy engine for deploying policy within the system and, optionally, self-organizing network coding for data transport, wherein in certain embodiments, a policy applies to how data will be presented in a multi-sensory interface, a heat map visual interface, or in an interface that operates with self-organized tuning of the interface layer.

As noted above, methods and systems are disclosed herein for on-device sensor fusion and data storage for industrial IoT devices, such as an industrial data collector, including self-organizing, remotely organized, or network-sensitive industrial data collectors, where data from multiple sensors is multiplexed at the device for storage of a fused data stream. Embodiments include a self-organizing marketplace that presents fused sensor data that is extracted from on-device storage of IoT devices. Embodiments include streaming fused sensor information from multiple industrial sensors and from an on-device data storage facility to a data pool. Embodiments include training a model to determine what data should be stored on a device in a data collection environment. Embodiments include a self-organizing swarm of industrial data collectors that organize among themselves to optimize data collection, where at least some of the data collectors have on-device storage of fused data from multiple sensors. Embodiments include storing distributed ledger information with fused sensor information on an industrial IoT device. Embodiments include a system for data collection with on-device sensor fusion, such as of industrial sensor data and, optionally, self-organizing network coding for data transport, where data structures are stored to support alternative, multi-sensory modes of presentation, visual heat map modes of presentation, and/or an interface that operates with self-organized tuning of the interface layer.

As noted above, methods and systems are disclosed herein for a self-organizing data marketplace for industrial IoT data, where available data elements are organized in the marketplace for consumption by consumers based on training a self-organizing facility with a training set and feedback from measures of marketplace success. Embodiments include organizing a set of data pools in a self-organizing data marketplace based on utilization metrics for the data pools. Embodiments include training a model to determine pricing for data in a data marketplace. The data marketplace is fed with data streams from a self-organizing swarm of industrial data collectors, a set of industrial data collectors that have self-organizing storage, or self-organizing, network-sensitive, or remotely organized industrial data collectors. Embodiments include using a distributed ledger to store transactional data for a self-organizing marketplace for industrial IoT data. Embodiments include using self-organizing network coding for data transport to a marketplace for sensor data collected in industrial environments. Embodiments include providing a library of data structures suitable for presenting data in alternative, multi-sensory interface modes in a data marketplace, in heat map visualization, and/or in interfaces that operate with self-organized tuning of the interface layer.

As noted above, methods and systems are disclosed herein for self-organizing data pools such as those that self-organize based on utilization and/or yield metrics that may be tracked for a plurality of data pools. In embodiments, the pools contain data from self-organizing data collectors. Embodiments include training a model to present the most valuable data in a data marketplace, where training is based on industry-specific measures of success. Embodiments include populating a set of self-organizing data pools with data from a self-organizing swarm of data collectors. Embodiments include using a distributed ledger to store transactional information for data that is deployed in data pools, where the distributed ledger is distributed across the data pools. Embodiments include populating a set of self-organizing data pools with data from a set of network-sensitive or remotely organized data collectors or a set of data collectors having self-organizing storage. Embodiments include a system for data collection in an industrial environment with self-organizing pools for data storage and self-organizing network coding for data transport, such as a system that includes a source data structure for supporting data presentation in a multi-sensory interface, in a heat map interface, and/or in an interface that operates with self-organized tuning of the interface layer.

As noted above, methods and systems are disclosed herein for training AI models based on industry-specific feedback, such as that reflects a measure of utilization, yield, or impact, where the AI model operates on sensor data from an industrial environment. Embodiments include training a swarm of data collectors, or data collectors, such as remotely organized, self-organizing, or network-sensitive data collectors, based on industry-specific feedback or network and industrial conditions in an industrial environment, such as to configure storage. Embodiments include training an AI model to identify and use available storage locations in an industrial environment for storing distributed ledger information. Embodiments include training a remote organizer for a remotely organized data collector based on industry-specific feedback measures. Embodiments include a system for data collection in an industrial environment with cloud-based training of a network coding model for organizing network coding for data transport or a facility that manages presentation of data in a multi-sensory interface, in a heat map interface, and/or in an interface that operates with self-organized tuning of the interface layer.

As noted above, methods and systems are disclosed herein for a self-organized swarm of industrial data collectors that organize among themselves to optimize data collection based on the capabilities and conditions of the members of the swarm. Embodiments include deploying distributed ledger data structures across a swarm of data. Data collectors may be network-sensitive data collectors configured for remote organization or have self-organizing storage. Systems for data collection in an industrial environment with a swarm can include a self-organizing network coding for data transport. Systems include swarms that relay information for use in a multi-sensory interface, in a heat map interface, and/or in an interface that operates with self-organized tuning of the interface layer.

As noted above, methods and systems are disclosed herein for an industrial IoT distributed ledger, including a distributed ledger supporting the tracking of transactions executed in an automated data marketplace for industrial IoT data. Embodiments include a self-organizing data collector that is configured to distribute collected information to a distributed ledger. Embodiments include a network-sensitive data collector that is configured to distribute collected information to a distributed ledger based on network conditions. Embodiments include a remotely organized data collector that is configured to distribute collected information to a distributed ledger based on intelligent, remote management of the distribution. Embodiments include a data collector with self-organizing local storage that is configured to distribute collected information to a distributed ledger. Embodiments include a system for data collection in an industrial environment using a distributed ledger for data storage and self-organizing network coding for data transport, wherein data storage is of a data structure supporting a haptic interface for data presentation, a heat map interface for data presentation, and/or an interface that operates with self-organized tuning of the interface layer.

As noted above, methods and systems are disclosed herein for a self-organizing collector, including a self-organizing, multi-sensor data collector that can optimize data collection, power and/or yield based on conditions in its environment, and is optionally responsive to remote organization. Embodiments include a self-organizing data collector that organizes at least in part based on network conditions. Embodiments include a self-organizing data collector with self-organizing storage for data collected in an industrial data collection environment. Embodiments include a system for data collection in an industrial environment with self-organizing data collection and self-organizing network coding for data transport. Embodiments include a system for data collection in an industrial environment with a self-organizing data collector that feeds a data structure supporting a haptic or multi-sensory wearable interface for data presentation, a heat map interface for data presentation, and/or an interface that operates with self-organized tuning of the interface layer.

As noted above, methods and systems are disclosed herein for a network-sensitive collector, including a network condition-sensitive, self-organizing, multi-sensor data collector that can optimize based on bandwidth, quality of service, pricing, and/or other network conditions. Embodiments include a remotely organized, network condition-sensitive universal data collector that can power up and down sensor interfaces based on need and/or conditions identified in an industrial data collection environment, including network conditions. Embodiments include a network-condition sensitive data collector with self-organizing storage for data collected in an industrial data collection environment. Embodiments include a network-condition sensitive data collector with self-organizing network coding for data transport in an industrial data collection environment. Embodiments include a system for data collection in an industrial environment with a network-sensitive data collector that relays a data structure supporting a haptic wearable interface for data presentation, a heat map interface for data presentation, and/or an interface that operates with self-organized tuning of the interface layer.

As noted above, methods and systems are disclosed herein for a remotely organized universal data collector that can power up and down sensor interfaces based on need and/or conditions identified in an industrial data collection environment. Embodiments include a remotely organized universal data collector with self-organizing storage for data collected in an industrial data collection environment. Embodiments include a system for data collection in an industrial environment with remote control of data collection and self-organizing network coding for data transport. Embodiments include a remotely organized data collector for storing sensor data and delivering instructions for use of the data in a haptic or multi-sensory wearable interface, in a heat map visual interface, and/or in an interface that operates with self-organized tuning of the interface layer.

As noted above, methods and systems are disclosed herein for self-organizing storage for a multi-sensor data collector, including self-organizing storage for a multi-sensor data collector for industrial sensor data. Embodiments include a system for data collection in an industrial environment with self-organizing data storage and self-organizing network coding for data transport. Embodiments include a data collector with self-organizing storage for storing sensor data and instructions for translating the data for use in a haptic wearable interface, in a heat map presentation interface, and/or in an interface that operates with self-organized tuning of the interface layer.

As noted above, methods and systems are disclosed herein for self-organizing network coding for a multi-sensor data network, including self-organizing network coding for a data network that transports data from multiple sensors in an industrial data collection environment. The system includes a data structure supporting a haptic wearable interface for data presentation, a heat map interface for data presentation, and/or self-organized tuning of an interface layer for data presentation.

As noted above, methods and systems are disclosed herein for a haptic or multi-sensory user interface, including a wearable haptic or multi-sensory user interface for an industrial sensor data collector, with vibration, heat, electrical, and/or sound outputs. Embodiments include a wearable haptic user interface for conveying industrial state information from a data collector, with vibration, heat, electrical, and/or sound outputs. The wearable also has a visual presentation layer for presenting a heat map that indicates a parameter of the data. Embodiments include condition-sensitive, self-organized tuning of AR/VR interfaces and multi-sensory interfaces based on feedback metrics and/or training in industrial environments.

As noted above, methods and systems are disclosed herein for a presentation layer for AR/VR industrial glasses, where heat map elements are presented based on patterns and/or parameters in collected data. Embodiments include condition-sensitive, self-organized tuning of a heat map AR/VR interface based on feedback metrics and/or training in industrial environments. As noted above, methods and systems are disclosed herein for condition-sensitive, self-organized tuning of AR/VR interfaces based on feedback metrics and/or training in industrial environments.

The following illustrative clauses describe certain embodiments of the present disclosure. The data collection system mentioned in the following disclosure may be a local data collection system 102, a host processing system 112 (e.g., using a cloud platform), or a combination of a local system and a host system. In embodiments, a data collection system or data collection and processing system is provided having the use of an analog crosspoint switch for collecting data having variable groups of analog sensor inputs and, in some embodiments, having IP front-end-end signal conditioning on a multiplexer for improved signal-to-noise ratio, multiplexer continuous monitoring alarming features, the use of distributed CPLD chips with a dedicated bus for logic control of multiple MUX and data acquisition sections, high-amperage input capability using solid state relays and design topology, power-down capability of at least one of an analog sensor channel and of a component board, unique electrostatic protection for trigger and vibration inputs, and/or precise voltage reference for A/D zero reference.

In embodiments, a data collection and processing system is provided having the use of an analog crosspoint switch for collecting data having variable groups of analog sensor inputs and having a phase-lock loop band-pass tracking filter for obtaining slow-speed RPMs and phase information, digital derivation of phase relative to input and trigger channels using on-board timers, a peak-detector for auto-scaling that is routed into a separate analog-to-digital converter for peak detection, the routing of a trigger channel that is either raw or buffered into other analog channels, the use of higher input oversampling for delta-sigma A/D for lower sampling rate outputs to minimize AA filter requirements, and/or the use of a CPLD as a clock-divider for a delta-sigma analog-to-digital converter to achieve lower sampling rates without the need for digital resampling.

In embodiments, a data collection and processing system is provided having the use of an analog crosspoint switch for collecting data having variable groups of analog sensor inputs and having long blocks of data at a high-sampling rate, as opposed to multiple sets of data taken at different sampling rates, storage of calibration data with a maintenance history on-board card set, a rapid route creation capability using hierarchical templates, intelligent management of data collection bands, and/or a neural net expert system using intelligent management of data collection bands.

In embodiments, a data collection and processing system is provided having the use of an analog crosspoint switch for collecting data having variable groups of analog sensor inputs and having use of a database hierarchy in sensor data analysis, an expert system GUI graphical approach to defining intelligent data collection bands and diagnoses for the expert system, a graphical approach for back-calculation definition, proposed bearing analysis methods, torsional vibration detection/analysis utilizing transitory signal analysis, and/or improved integration using both analog and digital methods.

In embodiments, a data collection and processing system is provided having the use of an analog crosspoint switch for collecting data having variable groups of analog sensor inputs and having adaptive scheduling techniques for continuous monitoring of analog data in a local environment, data acquisition parking features, a self-sufficient data acquisition box, SD card storage, extended onboard statistical capabilities for continuous monitoring, the use of ambient, local and vibration noise for prediction, smart route changes based on incoming data or alarms to enable simultaneous dynamic data for analysis or correlation, smart ODS and transfer functions, a hierarchical multiplexer, identification of sensor overload, and/or RF identification and an inclinometer.

In embodiments, a data collection and processing system is provided having the use of an analog crosspoint switch for collecting data having variable groups of analog sensor inputs and having continuous ultrasonic monitoring, cloud-based, machine pattern recognition based on the fusion of remote, analog industrial sensors, cloud-based, machine pattern analysis of state information from multiple analog industrial sensors to provide anticipated state information for an industrial system, cloud-based policy automation engine for IoT, with creation, deployment, and management of IoT devices, on-device sensor fusion and data storage for industrial IoT devices, a self-organizing data marketplace for industrial IoT data, self-organization of data pools based on utilization and/or yield metrics, training AI models based on industry-specific feedback, a self-organized swarm of industrial data collectors, an IoT distributed ledger, a self-organizing collector, a network-sensitive collector, a remotely organized collector, a self-organizing storage for a multi-sensor data collector, a self-organizing network coding for multi-sensor data network, a wearable haptic user interface for an industrial sensor data collector, with vibration, heat, electrical, and/or sound outputs, heat maps displaying collected data for AR/VR, and/or automatically tuned AR/VR visualization of data collected by a data collector.

In embodiments, a data collection and processing system is provided having IP front-end signal conditioning on a multiplexer for improved signal-to-noise ratio. In embodiments, a data collection and processing system is provided having IP front-end signal conditioning on a multiplexer for improved signal-to-noise ratio and having at least one of: multiplexer continuous monitoring alarming features; IP front-end signal conditioning on a multiplexer for improved signal-to-noise ratio; the use of distributed CPLD chips with dedicated bus for logic control of multiple MUX and data acquisition sections. In embodiments, a data collection and processing system is provided having IP front-end signal conditioning on a multiplexer for improved signal-to-noise ratio and having at least one of: high-amperage input capability using solid state relays and design topology; power-down capability of at least one analog sensor channel and of a component board; unique electrostatic protection for trigger and vibration inputs; precise voltage reference for A/D zero reference; and a phase-lock loop band-pass tracking filter for obtaining slow-speed RPMs and phase information. In embodiments, a data collection and processing system is provided having IP front-end signal conditioning on a multiplexer for improved signal-to-noise ratio and having at least one of: digital derivation of phase relative to input and trigger channels using on-board timers; a peak-detector for auto-scaling that is routed into a separate analog-to-digital converter for peak detection; routing of a trigger channel that is either raw or buffered into other analog channels; the use of higher input oversampling for delta-sigma A/D for lower sampling rate outputs to minimize AA filter requirements; and the use of a CPLD as a clock-divider for a delta-sigma analog-to-digital converter to achieve lower sampling rates without the need for digital resampling. In embodiments, a data collection and processing system is provided having IP front-end signal conditioning on a multiplexer for improved signal-to-noise ratio and having at least one of: long blocks of data at a high-sampling rate as opposed to multiple sets of data taken at different sampling rates; storage of calibration data with a maintenance history on-board card set; a rapid route creation capability using hierarchical templates; intelligent management of data collection bands; and a neural net expert system using intelligent management of data collection bands. In embodiments, a data collection and processing system is provided having IP front-end signal conditioning on a multiplexer for improved signal-to-noise ratio and having at least one of: use of a database hierarchy in sensor data analysis; an expert system GUI graphical approach to defining intelligent data collection bands and diagnoses for the expert system; and a graphical approach for back-calculation definition. In embodiments, a data collection and processing system is provided having IP front-end signal conditioning on a multiplexer for improved signal-to-noise ratio and having at least one of: proposed bearing analysis methods; torsional vibration detection/analysis utilizing transitory signal ; improved integration using both analog and digital methods; adaptive scheduling techniques for continuous monitoring of analog data in a local environment; data acquisition parking features ; a self-sufficient data acquisition box; and SD card storage. In embodiments, a data collection and processing system is provided having IP front-end signal conditioning on a multiplexer for improved signal-to-noise ratio and having at least one of: extended onboard statistical capabilities for continuous monitoring; the use of ambient, local, and vibration noise for prediction; smart route changes based on incoming data or alarms to enable simultaneous dynamic data for analysis or correlation; smart ODS and transfer functions; and a hierarchical multiplexer. In embodiments, a data collection and processing system is provided having IP front-end signal conditioning on a multiplexer for improved signal-to-noise ratio and having at least one of: identification of sensor overload; RF identification and an inclinometer; continuous ultrasonic monitoring; machine pattern recognition based on the fusion of remote, analog industrial sensors; and cloud-based, machine pattern analysis of state information from multiple analog industrial sensors to provide anticipated state information for an industrial system. In embodiments, a data collection and processing system is provided having IP front-end signal conditioning on a multiplexer for improved signal-to-noise ratio and having at least one of: cloud-based policy automation engine for IoT, with creation, deployment, and management of IoT devices; on-device sensor fusion and data storage for industrial IoT devices; a self-organizing data marketplace for industrial IoT data; and self-organization of data pools based on utilization and/or yield metrics. In embodiments, a data collection and processing system is provided having IP front-end signal conditioning on a multiplexer for improved signal-to-noise ratio and having at least one of: training AI models based on industry-specific feedback; a self-organized swarm of industrial data collectors; an IoT distributed ledger ; a self-organizing collector; and a network-sensitive collector. In embodiments, a data collection and processing system is provided having IP front-end signal conditioning on a multiplexer for improved signal-to-noise ratio and having at least one of: a remotely organized collector; a self-organizing storage for a multi-sensor data collector; a self-organizing network coding for multi-sensor data network; a wearable haptic user interface for an industrial sensor data collector, with vibration, heat, electrical, and/or sound outputs; heat maps displaying collected data for AR/VR; and automatically tuned AR/VR visualization of data collected by a data collector.

In embodiments, a data collection and processing system is provided having multiplexer continuous monitoring alarming features. In embodiments, a data collection and processing system is provided having multiplexer continuous monitoring alarming features and having at least one of: the use of distributed CPLD chips with dedicated bus for logic control of multiple MUX and data acquisition sections; high-amperage input capability using solid state relays and design topology; power-down capability of at least one of an analog sensor channel and/or of a component board; unique electrostatic protection for trigger and vibration inputs; and precise voltage reference for A/D zero reference. In embodiments, a data collection and processing system is provided having multiplexer continuous monitoring alarming features and having at least one of: a phase-lock loop band-pass tracking filter for obtaining slow-speed RPMs and phase information; digital derivation of phase relative to input and trigger channels using on-board timers; a peak-detector for auto-scaling that is routed into a separate analog-to-digital converter for peak detection; and routing of a trigger channel that is either raw or buffered into other analog channels. In embodiments, a data collection and processing system is provided having multiplexer continuous monitoring alarming features and having at least one of: the use of higher input oversampling for delta-sigma A/D for lower sampling rate outputs to minimize AA filter requirements; the use of a CPLD as a clock-divider for a delta-sigma analog-to-digital converter to achieve lower sampling rates without the need for digital resampling; long blocks of data at a high-sampling rate as opposed to multiple sets of data taken at different sampling rates; storage of calibration data with a maintenance history on-board card set; and a rapid route creation capability using hierarchical templates. In embodiments, a data collection and processing system is provided having multiplexer continuous monitoring alarming features and having at least one of: intelligent management of data collection bands; a neural net expert system using intelligent management of data collection bands; use of a database hierarchy in sensor data analysis; and an expert system GUI graphical approach to defining intelligent data collection bands and diagnoses for the expert system. In embodiments, a data collection and processing system is provided having multiplexer continuous monitoring alarming features and having at least one of: a graphical approach for back-calculation definition; proposed bearing analysis methods; torsional vibration detection/analysis utilizing transitory signal analysis; and improved integration using both analog and digital methods. In embodiments, a data collection and processing system is provided having multiplexer continuous monitoring alarming features and having at least one of adaptive scheduling techniques for continuous monitoring of analog data in a local environment; data acquisition parking features; a self-sufficient data acquisition box; and SD card storage. In embodiments, a data collection and processing system is provided having multiplexer continuous monitoring alarming features and having at least one of: extended onboard statistical capabilities for continuous monitoring; the use of ambient, local and vibration noise for prediction; smart route changes based on incoming data or alarms to enable simultaneous dynamic data for analysis or correlation; and smart ODS and transfer functions. In embodiments, a data collection and processing system is provided having multiplexer continuous monitoring alarming features and having at least one of: a hierarchical multiplexer; identification of sensor overload; RF identification, and an inclinometer; cloud-based, machine pattern recognition based on the fusion of remote, analog industrial sensors; and machine pattern analysis of state information from multiple analog industrial sensors to provide anticipated state information for an industrial system. In embodiments, a data collection and processing system is provided having multiplexer continuous monitoring alarming features and having at least one of: cloud-based policy automation engine for IoT, with creation, deployment, and management of IoT devices; on-device sensor fusion and data storage for industrial IoT devices; a self-organizing data marketplace for industrial IoT data; self-organization of data pools based on utilization and/or yield metrics; and training AI models based on industry-specific feedback. In embodiments, a data collection and processing system is provided having multiplexer continuous monitoring alarming features and having at least one of: a self-organized swarm of industrial data collectors; an IoT distributed ledger; a self-organizing collector; a network-sensitive collector; and a remotely organized collector. In embodiments, a data collection and processing system is provided having multiplexer continuous monitoring alarming features and having at least one of: a self-organizing storage for a multi-sensor data collector; and a self-organizing network coding for multi-sensor data network. In embodiments, a data collection and processing system is provided having multiplexer continuous monitoring alarming features and having at least one of: a wearable haptic user interface for an industrial sensor data collector, with vibration, heat, electrical, and/or sound outputs; heat maps displaying collected data for AR/VR; and automatically tuned AR/VR visualization of data collected by a data collector.

In embodiments, a data collection and processing system is provided having the use of distributed CPLD chips with dedicated bus for logic control of multiple MUX and data acquisition sections. In embodiments, a data collection and processing system is provided having the use of distributed CPLD chips with dedicated bus for logic control of multiple MUX and data acquisition sections and having high-amperage input capability using solid state relays and design topology. In embodiments, a data collection and processing system is provided having the use of distributed CPLD chips with dedicated bus for logic control of multiple MUX and data acquisition sections and having power-down capability of at least one of an analog sensor channel and of a component board. In embodiments, a data collection and processing system is provided having the use of distributed CPLD chips with dedicated bus for logic control of multiple MUX and data acquisition sections and having unique electrostatic protection for trigger and vibration inputs. In embodiments, a data collection and processing system is provided having the use of distributed CPLD chips with dedicated bus for logic control of multiple MUX and data acquisition sections and having precise voltage reference for A/D zero reference. In embodiments, a data collection and processing system is provided having the use of distributed CPLD chips with dedicated bus for logic control of multiple MUX and data acquisition sections and having a phase-lock loop band-pass tracking filter for obtaining slow-speed RPMs and phase information. In embodiments, a data collection and processing system is provided having the use of distributed CPLD chips with dedicated bus for logic control of multiple MUX and data acquisition sections and having digital derivation of phase relative to input and trigger channels using on-board timers. In embodiments, a data collection and processing system is provided having the use of distributed CPLD chips with dedicated bus for logic control of multiple MUX and data acquisition sections and having a peak-detector for auto-scaling that is routed into a separate analog-to-digital converter for peak detection. In embodiments, a data collection and processing system is provided having the use of distributed CPLD chips with dedicated bus for logic control of multiple MUX and data acquisition sections and having routing of a trigger channel that is either raw or buffered into other analog channels. In embodiments, a data collection and processing system is provided having the use of distributed CPLD chips with dedicated bus for logic control of multiple MUX and data acquisition sections and having the use of higher input oversampling for delta-sigma A/D for lower sampling rate outputs to minimize AA filter requirements. In embodiments, a data collection and processing system is provided having the use of distributed CPLD chips with dedicated bus for logic control of multiple MUX and data acquisition sections and having the use of a CPLD as a clock-divider for a delta-sigma analog-to-digital converter to achieve lower sampling rates without the need for digital resampling. In embodiments, a data collection and processing system is provided having the use of distributed CPLD chips with dedicated bus for logic control of multiple MUX and data acquisition sections and having long blocks of data at a high-sampling rate as opposed to multiple sets of data taken at different sampling rates. In embodiments, a data collection and processing system is provided having the use of distributed CPLD chips with dedicated bus for logic control of multiple MUX and data acquisition sections and having storage of calibration data with a maintenance history onboard card set. In embodiments, a data collection and processing system is provided having the use of distributed CPLD chips with dedicated bus for logic control of multiple MUX and data acquisition sections and having a rapid route creation capability using hierarchical templates. In embodiments, a data collection and processing system is provided having the use of distributed CPLD chips with dedicated bus for logic control of multiple MUX and data acquisition sections and having intelligent management of data collection bands. In embodiments, a data collection and processing system is provided having the use of distributed CPLD chips with dedicated bus for logic control of multiple MUX and data acquisition sections and having a neural net expert system using intelligent management of data collection bands. In embodiments, a data collection and processing system is provided having the use of distributed CPLD chips with dedicated bus for logic control of multiple MUX and data acquisition sections and having use of a database hierarchy in sensor data analysis. In embodiments, a data collection and processing system is provided having the use of distributed CPLD chips with dedicated bus for logic control of multiple MUX and data acquisition sections and having an expert system GUI graphical approach to defining intelligent data collection bands and diagnoses for the expert system. In embodiments, a data collection and processing system is provided having the use of distributed CPLD chips with dedicated bus for logic control of multiple MUX and data acquisition sections and having a graphical approach for back-calculation definition. In embodiments, a data collection and processing system is provided having the use of distributed CPLD chips with dedicated bus for logic control of multiple MUX and data acquisition sections and having proposed bearing analysis methods. In embodiments, a data collection and processing system is provided having the use of distributed CPLD chips with dedicated bus for logic control of multiple MUX and data acquisition sections and having torsional vibration detection/analysis utilizing transitory signal analysis. In embodiments, a data collection and processing system is provided having the use of distributed CPLD chips with dedicated bus for logic control of multiple MUX and data acquisition sections and having improved integration using both analog and digital methods. In embodiments, a data collection and processing system is provided having the use of distributed CPLD chips with dedicated bus for logic control of multiple MUX and data acquisition sections and having adaptive scheduling techniques for continuous monitoring of analog data in a local environment. In embodiments, a data collection and processing system is provided having the use of distributed CPLD chips with dedicated bus for logic control of multiple MUX and data acquisition sections and having data acquisition parking features. In embodiments, a data collection and processing system is provided having the use of distributed CPLD chips with dedicated bus for logic control of multiple MUX and data acquisition sections and having a self-sufficient data acquisition box. In embodiments, a data collection and processing system is provided having the use of distributed CPLD chips with dedicated bus for logic control of multiple MUX and data acquisition sections and having SD card storage. In embodiments, a data collection and processing system is provided having the use of distributed CPLD chips with dedicated bus for logic control of multiple MUX and data acquisition sections and having extended onboard statistical capabilities for continuous monitoring. In embodiments, a data collection and processing system is provided having the use of distributed CPLD chips with dedicated bus for logic control of multiple MUX and data acquisition sections and having the use of ambient, local and vibration noise for prediction. In embodiments, a data collection and processing system is provided having the use of distributed CPLD chips with dedicated bus for logic control of multiple MUX and data acquisition sections and having smart route changes based on incoming data or alarms to enable simultaneous dynamic data for analysis or correlation. In embodiments, a data collection and processing system is provided having the use of distributed CPLD chips with dedicated bus for logic control of multiple MUX and data acquisition sections and having smart ODS and transfer functions. In embodiments, a data collection and processing system is provided having the use of distributed CPLD chips with dedicated bus for logic control of multiple MUX and data acquisition sections and having a hierarchical multiplexer. In embodiments, a data collection and processing system is provided having the use of distributed CPLD chips with dedicated bus for logic control of multiple MUX and data acquisition sections and having identification of sensor overload. In embodiments, a data collection and processing system is provided having the use of distributed CPLD chips with dedicated bus for logic control of multiple MUX and data acquisition sections and having RF identification and an inclinometer. In embodiments, a data collection and processing system is provided having the use of distributed CPLD chips with dedicated bus for logic control of multiple MUX and data acquisition sections and having continuous ultrasonic monitoring. In embodiments, a data collection and processing system is provided having the use of distributed CPLD chips with dedicated bus for logic control of multiple MUX and data acquisition sections and having cloud-based, machine pattern recognition based on fusion of remote, analog industrial sensors. In embodiments, a data collection and processing system is provided having the use of distributed CPLD chips with dedicated bus for logic control of multiple MUX and data acquisition sections and having cloud-based, machine pattern analysis of state information from multiple analog industrial sensors to provide anticipated state information for an industrial system. In embodiments, a data collection and processing system is provided having the use of distributed CPLD chips with dedicated bus for logic control of multiple MUX and data acquisition sections and having cloud-based policy automation engine for IoT, with creation, deployment, and management of IoT devices. In embodiments, a data collection and processing system is provided having the use of distributed CPLD chips with dedicated bus for logic control of multiple MUX and data acquisition sections and having on-device sensor fusion and data storage for industrial IoT devices. In embodiments, a data collection and processing system is provided having the use of distributed CPLD chips with dedicated bus for logic control of multiple MUX and data acquisition sections and having a self-organizing data marketplace for industrial IoT data. In embodiments, a data collection and processing system is provided having the use of distributed CPLD chips with dedicated bus for logic control of multiple MUX and data acquisition sections and having self-organization of data pools based on utilization and/or yield metrics. In embodiments, a data collection and processing system is provided having the use of distributed CPLD chips with dedicated bus for logic control of multiple MUX and data acquisition sections and having training AI models based on industry-specific feedback. In embodiments, a data collection and processing system is provided having the use of distributed CPLD chips with dedicated bus for logic control of multiple MUX and data acquisition sections and having a self-organized swarm of industrial data collectors. In embodiments, a data collection and processing system is provided having the use of distributed CPLD chips with dedicated bus for logic control of multiple MUX and data acquisition sections and having an IoT distributed ledger. In embodiments, a data collection and processing system is provided having the use of distributed CPLD chips with dedicated bus for logic control of multiple MUX and data acquisition sections and having a self-organizing collector. In embodiments, a data collection and processing system is provided having the use of distributed CPLD chips with dedicated bus for logic control of multiple MUX and data acquisition sections and having a network-sensitive collector. In embodiments, a data collection and processing system is provided having the use of distributed CPLD chips with dedicated bus for logic control of multiple MUX and data acquisition sections and having a remotely organized collector. In embodiments, a data collection and processing system is provided having the use of distributed CPLD chips with dedicated bus for logic control of multiple MUX and data acquisition sections and having a self-organizing storage for a multi-sensor data collector. In embodiments, a data collection and processing system is provided having the use of distributed CPLD chips with dedicated bus for logic control of multiple MUX and data acquisition sections and having a self-organizing network coding for multi-sensor data network. In embodiments, a data collection and processing system is provided having the use of distributed CPLD chips with dedicated bus for logic control of multiple MUX and data acquisition sections and having a wearable haptic user interface for an industrial sensor data collector, with vibration, heat, electrical, and/or sound outputs. In embodiments, a data collection and processing system is provided having the use of distributed CPLD chips with dedicated bus for logic control of multiple MUX and data acquisition sections and having heat maps displaying collected data for AR/VR. In embodiments, a data collection and processing system is provided having the use of distributed CPLD chips with dedicated bus for logic control of multiple MUX and data acquisition sections and having automatically tuned AR/VR visualization of data collected by a data collector.

In embodiments, a data collection and processing system is provided having one or more of high-amperage input capability using solid state relays and design topology, power-down capability of at least one of an analog sensor channel and of a component board, unique electrostatic protection for trigger and vibration inputs, precise voltage reference for A/D zero reference, a phase-lock loop band-pass tracking filter for obtaining slow-speed RPMs and phase information, digital derivation of phase relative to input and trigger channels using on-board timers, a peak-detector for auto-scaling that is routed into a separate analog-to-digital converter for peak detection, routing of a trigger channel that is either raw or buffered into other analog channels, the use of higher input oversampling for delta-sigma A/D for lower sampling rate outputs to minimize anti-aliasing (AA) filter requirements, the use of a CPLD as a clock-divider for a delta-sigma analog-to-digital converter to achieve lower sampling rates without the need for digital resampling, long blocks of data at a high-sampling rate as opposed to multiple sets of data taken at different sampling rates, storage of calibration data with a maintenance history on-board card set, a rapid route creation capability using hierarchical templates, intelligent management of data collection bands, a neural net expert system using intelligent management of data collection bands, use of a database hierarchy in sensor data analysis, an expert system GUI graphical approach to defining intelligent data collection bands and diagnoses for the expert system, a graphical approach for back-calculation definition, proposed bearing analysis methods, torsional vibration detection/analysis utilizing transitory signal analysis, improved integration using both analog and digital methods, adaptive scheduling techniques for continuous monitoring of analog data in a local environment, data acquisition parking features, a self-sufficient data acquisition box, SD card storage, extended onboard statistical capabilities for continuous monitoring, the use of ambient, local, and vibration noise for prediction, smart route changes based on incoming data or alarms to enable simultaneous dynamic data for analysis or correlation, smart ODS and transfer functions, a hierarchical multiplexer, identification of sensor overload, RF identification and an inclinometer, continuous ultrasonic monitoring, cloud-based, machine pattern recognition based on fusion of remote, analog industrial sensors, cloud-based, machine pattern analysis of state information from multiple analog industrial sensors to provide anticipated state information for an industrial system, cloud-based policy automation engine for IoT, with creation, deployment, and management of IoT devices, on-device sensor fusion and data storage for industrial IoT devices, a self-organizing data marketplace for industrial IoT data, self-organization of data pools based on utilization and/or yield metrics, training AI models based on industry-specific feedback, a self-organized swarm of industrial data collectors, an IoT distributed ledger, a self-organizing collector, a network-sensitive collector, a remotely organized collector, a self-organizing storage for a multi-sensor data collector, a self-organizing network coding for multi-sensor data network, a wearable haptic user interface for an industrial sensor data collector, with vibration, heat, electrical, and/or sound outputs, heat maps displaying collected data for AR/VR, or automatically tuned AR/VR visualization of data collected by a data collector.

In embodiments, a platform is provided having one or more of cloud-based, machine pattern recognition based on fusion of remote, analog industrial sensors, cloud-based, machine pattern analysis of state information from multiple analog industrial sensors to provide anticipated state information for an industrial system, a cloud-based policy automation engine for IoT, with creation, deployment, and management of IoT devices, on-device sensor fusion and data storage for industrial IoT devices, a self-organizing data marketplace for industrial IoT data, self-organization of data pools based on utilization and/or yield metrics, training AI models based on industry-specific feedback, a self-organized swarm of industrial data collectors, an IoT distributed ledger, a self-organizing collector, a network-sensitive collector, a remotely organized collector, a self-organizing storage for a multi-sensor data collector, a self-organizing network coding for multi-sensor data network, a wearable haptic user interface for an industrial sensor data collector, with vibration, heat, electrical, and/or sound outputs, heat maps displaying collected data for AR/VR, or automatically tuned AR/VR visualization of data collected by a data collector.

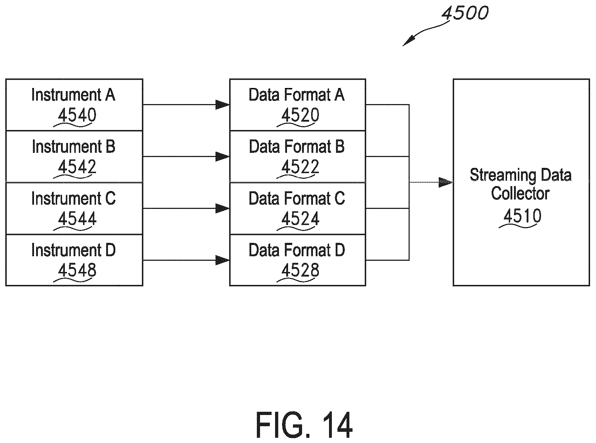

With regard to Figure 14, a range of existing data sensing and processing systems with industrial sensing, processing, and storage systems 4500 include a streaming data collector 4510 that may be configured to accept data in a range of formats as described herein. In embodiments, the range of formats can include a data format A 4520, a data format B 4522, a data format C 4524, and a data format D 4528 that may be sourced from a range of sensors. Moreover, the range of sensors can include an instrument A 4540, an instrument B 4542, an instrument C 4544, and an instrument D 4548. The streaming data collector 4510 may be configured with processing capabilities that enable access to the individual formats while leveraging the streaming, routing, self-organizing storage, and other capabilities described herein.

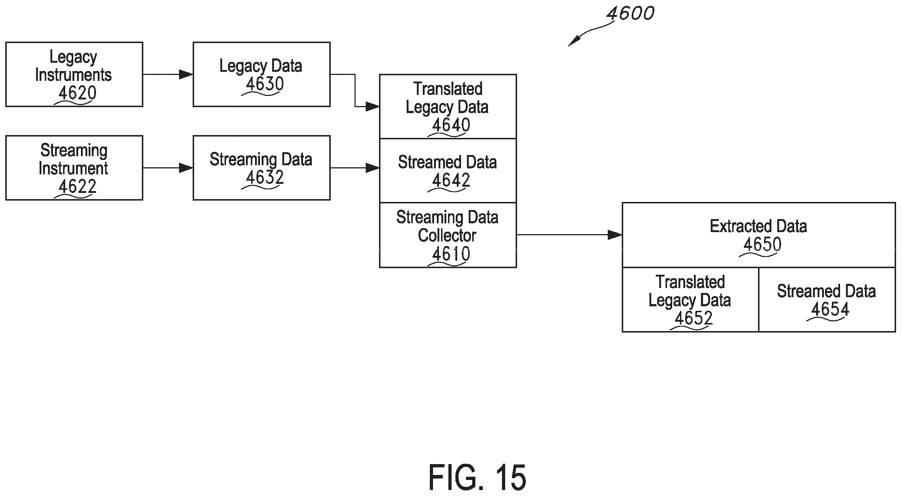

Figure 15 depicts methods and systems 4600 for industrial machine sensor data streaming collection, processing, and storage that facilitate use of a streaming data collector 4610 to collect and obtain data from legacy instruments 4620 and streaming instruments 4622. Legacy instruments 4620 and their data methodologies may capture and provide data that is limited in scope, due to the legacy systems and acquisition procedures, such as existing data methodologies described above herein, to a particular range of frequencies and the like. The streaming data collector 4610 may be configured to capture streaming instrument data 4632 as well as legacy instrument data 4630. The streaming data collector 4610 may also be configured to capture current streaming instruments 4620 and legacy instruments 4622 and sensors using current and legacy data methodologies. These embodiments may be useful in transition applications from the legacy instruments and processing to the streaming instruments and processing that may be current or desired instruments or methodologies. In embodiments, the streaming data collector 4610 may be configured to process the legacy instrument data 4630 so that it can be stored compatibly with the streamed instrument data 4632. The streaming data collector 4610 may process or parse the streamed instrument data 4632 based on the legacy instrument data 4630 to produce at least one extraction of the streamed data 4642 that is compatible with the legacy instrument data 4630 that can be processed into translated legacy data 4640. In embodiments, extracted data 4650 that can include extracted portions of translated legacy data 4652 and streamed data 4654 may be stored in a format that facilitates access and processing by legacy instrument data processing and further processing that can emulate legacy instrument data processing methods, and the like. In embodiments, the portions of the translated legacy data 4652 may also be stored in a format that facilitates processing with different methods that can take advantage of the greater frequencies, resolution, and volume of data possible with a streaming instrument.

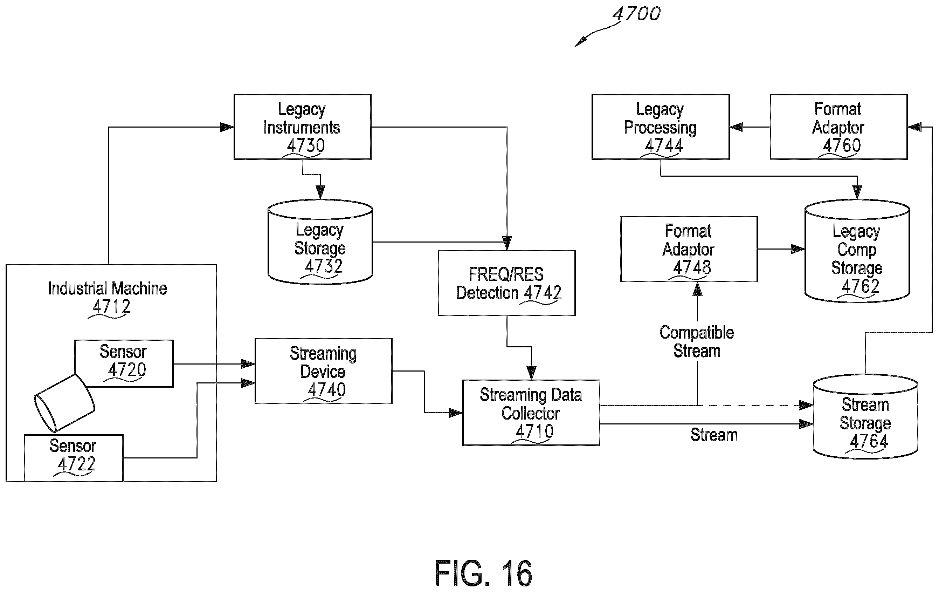

Figure 16 depicts alternate embodiments descriptive of methods and systems 4700 for industrial machine sensor data streaming, collection, processing, and storage that facilitate integration of legacy instruments and processing. In embodiments, a streaming data collector 4710 may be connected with an industrial machine 4712 and may include a plurality of sensors, such as streaming sensors 4720 and 4722 that may be configured to sense aspects of the industrial machine 4712 associated with at least one moving part of the machine 4712. The sensors 4720 and 4722 (or more) may communicate with one or more streaming devices 4740 that may facilitate streaming data from one or more of the sensors to the streaming data collector 4710. In embodiments, the industrial machine 4712 may also interface with or include one or more legacy instruments 4730 that may capture data associated with one or more moving parts of the industrial machine 4712 and store that data into a legacy data storage facility 4732.

In embodiments, a frequency and/or resolution detection facility 4742 may be configured to facilitate detecting information about legacy instrument sourced data, such as a frequency range of the data or a resolution of the data, and the like. The detection facility 4742 may operate on data directly from the legacy instruments 4730 or from data stored in a legacy storage facility 4732. The detection facility 4742 may communicate information detected about the legacy instruments 4730, its sourced data, and its stored data 4732, or the like to the streaming data collector 4710. Alternatively, the detection facility 4742 may access information, such as information about frequency ranges, resolution, and the like that characterizes the sourced data from the legacy instrument 4730 and/or may be accessed from a portion of the legacy storage facility 4732.

In embodiments, the streaming data collector 4710 may be configured with one or more automatic processors, algorithms, and/or other data methodologies to match up information captured by the one or more legacy instruments 4730 with a portion of data being provided by the one or more streaming devices 4740 from the one or more industrial machines 4712. Data from streaming devices 4740 may include a wider range of frequencies and resolutions than the sourced data of legacy instruments 4730 and, therefore, filtering and other such functions can be implemented to extract data from the streaming devices 4740 that corresponds to the sourced data of the legacy instruments 4730 in aspects such as frequency range, resolution, and the like. In embodiments, the configured streaming data collector 4710 may produce a plurality of streams of data, including a stream of data that may correspond to the stream of data from the streaming device 4740 and a separate stream of data that is compatible, in some aspects, with the legacy instrument sourced data and the infrastructure to ingest and automatically process it. Alternatively, the streaming data collector 4710 may output data in modes other than as a stream, such as batches, aggregations, summaries, and the like.

Configured streaming data collector 4710 may communicate with a stream storage facility 4764 for storing at least one of the data outputs from the streaming device 4710 and data extracted therefrom that may be compatible, in some aspects, with the sourced data of the legacy instruments 4730. A legacy compatible output of the configured streaming data collector 4710 may also be provided to a format adaptor facility 4748, 4760 that may configure, adapt, reformat, and make other adjustments to the legacy compatible data so that it can be stored in a legacy compatible storage facility 4762 so that legacy processing facilities 4744 may execute data processing methods on data in the legacy compatible storage facility 4762 and the like that are configured to process the sourced data of the legacy instruments 4730. In embodiments in which legacy compatible data is stored in the stream storage facility 4764, legacy processing facility 4744 may also automatically process this data after optionally being processed by format adaptor 4760. By arranging the data collection, streaming, processing, formatting, and storage elements to provide data in a format that is fully compatible with legacy instrument sourced data, transition from a legacy system can be simplified, and the sourced data from legacy instruments can be easily compared to newly acquired data (with more content) without losing the legacy value of the sourced data from the legacy instruments 4730.

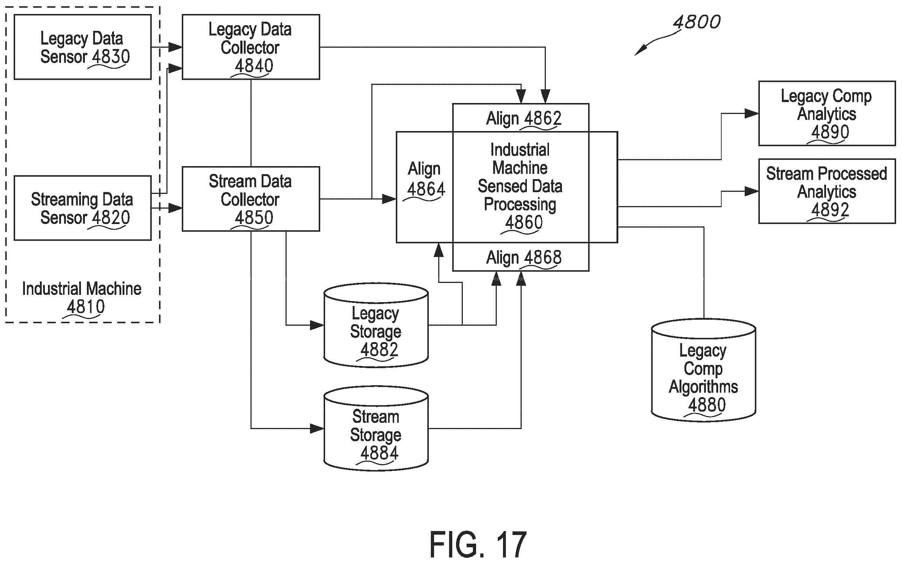

Figure 17 depicts alternate embodiments of the methods and systems 4800 described herein for industrial machine sensor data streaming, collection, processing, and storage that may be compatible with legacy instrument data collection and processing. In embodiments, processing industrial machine sensed data may be accomplished in a variety of ways including aligning legacy and streaming sources of data, such as by aligning stored legacy and streaming data; aligning stored legacy data with a stream of sensed data; and aligning legacy and streamed data as it is being collected. In embodiments, an industrial machine 4810 may include, communicate with, or be integrated with one or more stream data sensors 4820 that may sense aspects of the industrial machine 4810 such as aspects of one or more moving parts of the machine. The industrial machine 4810 may also communicate with, include, or be integrated with one or more legacy data sensors 4830 that may sense similar aspects of the industrial machine 4810. In embodiments, the one or more legacy data sensors 4830 may provide sensed data to one or more legacy data collectors 4840. The stream data sensors 4820 may produce an output that encompasses all aspects of (i.e., a richer signal) and is compatible with sensed data from the legacy data sensors 4830. The stream data sensors 4820 may provide compatible data to the legacy data collector 4840. By mimicking the legacy data sensors 4830 or their data streams, the stream data sensors 4820 may replace (or serve as suitable duplicate for) one or more legacy data sensors, such as during an upgrade of the sensing and processing system of an industrial machine. Frequency range, resolution, and the like may be mimicked by the stream data so as to ensure that all forms of legacy data are captured or can be derived from the stream data. In embodiments, format conversion, if needed, can also be performed by the stream data sensors 4820. The stream data sensors 4820 may also produce an alternate data stream that is suitable for collection by the stream data collector 4850. In embodiments, such an alternate data stream may be a superset of the legacy data sensor data in at least one or more of: frequency range, resolution, duration of sensing the data, and the like.

In embodiments, an industrial machine sensed data processing facility 4860 may execute a wide range of sensed data processing methods, some of which may be compatible with the data from legacy data sensors 4830 and may produce outputs that may meet legacy sensed data processing requirements. To facilitate use of a wide range of data processing capabilities of processing facility 4860, legacy and stream data may need to be aligned so that a compatible portion of stream data may be extracted for processing with legacy compatible methods and the like. In embodiments, Figure 17 depicts three different techniques for aligning stream data to legacy data. A first alignment methodology 4862 includes aligning legacy data output by the legacy data collector 4840 with stream data output by the stream data collector 4850. As data is provided by the legacy data collector 4840, aspects of the data may be detected, such as resolution, frequency, duration, and the like, and may be used as control for a processing method that identifies portions of a stream of data from the stream data collector 4850 that are purposely compatible with the legacy data. The processing facility 4860 may apply one or more legacy compatible methods on the identified portions of the stream data to extract data that can be easily compared to or referenced against the legacy data.

In embodiments, a second alignment methodology 4864 may involve aligning streaming data with data from a legacy storage facility 4882. In embodiments, a third alignment methodology 4868 may involve aligning stored stream data from a stream storage facility 4884 with legacy data from the legacy data storage facility 4882. In each of the methodologies 4862, 4864, 4868, alignment data may be determined by processing the legacy data to detect aspects such as resolution, duration, frequency range, and the like. Alternatively, alignment may be performed by an alignment facility, such as facilities using methodologies 4862, 4864, 4868 that may receive or may be configured with legacy data descriptive information such as legacy frequency range, duration, resolution, and the like.

In embodiments, an industrial machine sensing data processing facility 4860 may have access to legacy compatible methods and algorithms that may be stored in a legacy data methodology storage facility 4880. These methodologies, algorithms, or other data in the legacy algorithm storage facility 4880 may also be a source of alignment information that could be communicated by the industrial machine sensed data processing facility 4860 to the various alignment facilities having methodologies 4862, 4864, 4868. By having access to legacy compatible algorithms and methodologies, the data processing facility 4860 may facilitate processing legacy data, streamed data that is compatible with legacy data, or portions of streamed data that represent the legacy data to produce legacy compatible analytics.

In embodiments, the data processing facility 4860 may execute a wide range of other sensed data processing methods, such as wavelet derivations and the like, to produce streamed data analytics 4892. In embodiments, the streaming data collector 102, 4510, 4610, 4710 (Figures 3, 6, 14, 15, 16) or data processing facility 4860 may include portable algorithms, methodologies, and inputs that may be defined and extracted from data streams. In many examples, a user or enterprise may already have existing and effective methods related to analyzing specific pieces of machinery and assets. These existing methods could be imported into the configured streaming data collector 102, 4510, 4610, 4710 or the data processing facility 4860 as portable algorithms or methodologies. Data processing, such as described herein for the configured streaming data collector 102, 4510, 4610, 4710 may also match an algorithm or methodology to a situation, then extract data from a stream to match to the data methodology from the legacy acquisition or legacy acquisition techniques. In embodiments, the streaming data collector 102, 4510, 4610, 4710 may be compatible with many types of systems and may be compatible with systems having varying degrees of criticality.

Exemplary industrial machine deployments of the methods and systems described herein are now described. An industrial machine may be a gas compressor. In an example, a gas compressor may operate an oil pump on a very large turbo machine, such as a very large turbo machine that includes 10,000 HP motors. The oil pump may be a highly critical system as its failure could cause an entire plant to shut down. The gas compressor in this example may run four stages at a very high frequency, such as 36,000 RPM, and may include tilt pad bearings that ride on an oil film. The oil pump in this example may have roller bearings, such that if an anticipated failure is not being picked up by a user, the oil pump may stop running, and the entire turbo machine would fail. Continuing with this example, the streaming data collector 102, 4510, 4610, 4710 may collect data related to vibrations, such as casing vibration and proximity probe vibration. Other bearings industrial machine examples may include generators, power plants, boiler feed pumps, fans, forced draft fans, induced draft fans, and the like. The streaming data collector 102, 4510, 4610, 4710 for a bearings system used in the industrial gas industry may support predictive analysis on the motors, such as that performed by model-based expert systems - for example, using voltage, current, and vibration as analysis metrics.

Another exemplary industrial machine deployment may be a motor and the streaming data collector 102, 4510, 4610, 4710 that may assist in the analysis of a motor by collecting voltage and current data on the motor, for example.

Yet another exemplary industrial machine deployment may include oil quality sensing. An industrial machine may conduct oil analysis, and the streaming data collector 102, 4510, 4610, 4710 may assist in searching for fragments of metal in oil, for example.

The methods and systems described herein may also be used in combination with model-based systems. Model-based systems may integrate with proximity probes. Proximity probes may be used to sense problems with machinery and shut machinery down due to sensed problems. A model-based system integrated with proximity probes may measure a peak waveform and send a signal that shuts down machinery based on the peak waveform measurement.

Enterprises that operate industrial machines may operate in many diverse industries. These industries may include industries that operate manufacturing lines, provide computing infrastructure, support financial services, provide HVAC equipment, and the like. These industries may be highly sensitive to lost operating time and the cost incurred due to lost operating time. HVAC equipment enterprises in particular may be concerned with data related to ultrasound, vibration, IR, and the like, and may get much more information about machine performance related to these metrics using the methods and systems of industrial machine sensed data streaming collection than from legacy systems.

Methods and systems described herein for industrial machine sensor data streaming, collection, processing, and storage may be configured to operate and integrate with existing data collection, processing and storage systems and may include a method for capturing a plurality of streams of sensed data from sensors deployed to monitor aspects of an industrial machine associated with at least one moving part of the machine; at least one of the streams containing a plurality of frequencies of data. The method may include identifying a subset of data in at least one of the multiple streams that corresponds to data representing at least one predefined frequency. The at least one predefined frequency is represented by a set of data collected from alternate sensors deployed to monitor aspects of the industrial machine associated with the at least one moving part of the machine. The method may further include processing the identified data with a data processing facility that processes the identified data with data methodologies configured to be applied to the set of data collected from alternate sensors. Lastly, the method may include storing the at least one of the streams of data, the identified subset of data, and a result of processing the identified data in an electronic data set.

The methods and systems may include a method for applying data captured from sensors deployed to monitor aspects of an industrial machine associated with at least one moving part of the machine, the data captured with predefined lines of resolution covering a predefined frequency range, to a frequency matching facility that identifies a subset of data streamed from other sensors deployed to monitor aspects of the industrial machine associated with at least one moving part of the machine, the streamed data comprising a plurality of lines of resolution and frequency ranges, the subset of data identified corresponding to the lines of resolution and predefined frequency range. This method may include storing the subset of data in an electronic data record in a format that corresponds to a format of the data captured with predefined lines of resolution, and signaling to a data processing facility the presence of the stored subset of data. This method may optionally include processing the subset of data with at least one of algorithms, methodologies, models, and pattern recognizers that corresponds to algorithms, methodologies, models, and pattern recognizers associated with processing the data captured with predefined lines of resolution covering a predefined frequency range.

The methods and systems may include a method for identifying a subset of streamed sensor data. The sensor data is captured from sensors deployed to monitor aspects of an industrial machine associated with at least one moving part of the machine. The subset of streamed sensor data is at predefined lines of resolution for a predefined frequency range. The method includes establishing a first logical route for communicating electronically between a first computing facility performing the identifying and a second computing facility. The identified subset of the streamed sensor data is communicated exclusively over the established first logical route when communicating the subset of streamed sensor data from the first facility to the second facility. This method may further include establishing a second logical route for communicating electronically between the first computing facility and the second computing facility for at least one portion of the streamed sensor data that is not the identified subset. This method may further include establishing a third logical route for communicating electronically between the first computing facility and the second computing facility for at least one portion of the streamed sensor data that includes the identified subset and at least one other portion of the data not represented by the identified subset.

The methods and systems may include a first data sensing and processing system that captures first data from a first set of sensors deployed to monitor aspects of an industrial machine associated with at least one moving part of the machine, the first data covering a set of lines of resolution and a frequency range. This system may include a second data sensing and processing system that captures and streams a second set of data from a second set of sensors deployed to monitor aspects of the industrial machine associated with at least one moving part of the machine, the second data covering a plurality of lines of resolution that includes the set of lines of resolution and a plurality of frequencies that includes the frequency range. The system may enable: (1) selecting a portion of the second data that corresponds to the set of lines of resolution and the frequency range of the first data; and (2) processing the selected portion of the second data with the first data sensing and processing system.

The methods and systems may include a method for automatically processing a portion of a stream of sensed data. The sensed data received from a first set of sensors deployed to monitor aspects of an industrial machine associated with at least one moving part of the machine in response to an electronic data structure that facilitates extracting a subset of the stream of sensed data that corresponds to a set of sensed data received from a second set of sensors deployed to monitor the aspects of the industrial machine associated with the at least one moving part of the machine. The set of sensed data is constrained to a frequency range. The stream of sensed data includes a range of frequencies that exceeds the frequency range of the set of sensed data. The processing comprises executing data methodologies on a portion of the stream of sensed data that is constrained to the frequency range of the set of sensed data. The data methodologies are configured to process the set of sensed data.

The methods and systems may include a method for receiving first data from sensors deployed to monitor aspects of an industrial machine associated with at least one moving part of the machine. This method may further include: (1) detecting at least one of a frequency range and lines of resolution represented by the first data, and (2) receiving a stream of data from sensors deployed to monitor the aspects of the industrial machine associated with the at least one moving part of the machine. The stream of data includes: a plurality of frequency ranges and a plurality of lines of resolution that exceeds the frequency range and the lines of resolution represented by the first data; extracting a set of data from the stream of data that corresponds to at least one of the frequency range and the lines of resolution represented by the first data; and processing the extracted set of data with a data processing method that is configured to process data within the frequency range and within the lines of resolution of the first data.

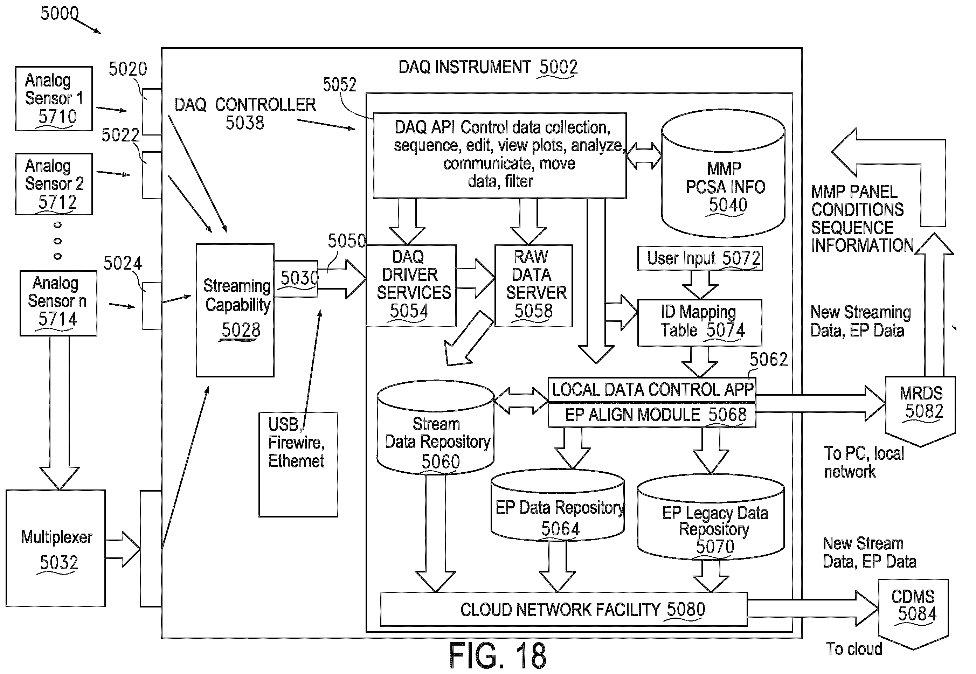

The methods and systems disclosed herein may include, connect to, or be integrated with a data acquisition instrument and in the many embodiments, Figure 18 shows methods and systems 5000 that includes a data acquisition (DAQ) streaming instrument 5002 also known as an SDAQ. In embodiments, output from sensors 5010, 5012, 5014 may be of various types including vibration, temperature, pressure, ultrasound and so on. In my many examples, one of the sensors may be used. In further examples, many of the sensors may be used and their signals may be used individually or in predetermined combinations and/or at predetermined intervals, circumstances, setups, and the like.

In embodiments, the output signals from the sensors 5010, 5012, 5014 may be fed into instrument inputs 5020, 5022, 5024 of the DAQ instrument 5002 and may be configured with additional streaming capabilities 5028. By way of these many examples, the output signals from the sensors 5010, 5012, 5014, or more as applicable, may be conditioned as an analog signal before digitization with respect to at least scaling and filtering. The signals may then be digitized by an analog-to-digital converter 5030. The signals received from all relevant channels (i.e., one or more channels are switched on manually, by alarm, by route, and the like) may be simultaneously sampled at a predetermined rate sufficient to perform the maximum desired frequency analysis that may be adjusted and readjusted as needed or otherwise held constant to ensure compatibility or conformance with other relevant datasets. In embodiments, the signals are sampled for a relatively long time and gap-free as one continuous stream so as to enable further post-processing at lower sampling rates with sufficient individual sampling.

In embodiments, data may be streamed from a collection of points and then the next set of data may be collected from additional points according to a prescribed sequence, route, path, or the like. In many examples, the sensors 5010, 5012, 5014 or more may be moved to the next location according to the prescribed sequence, route, prearranged configurations, or the like. In certain examples, not all of the sensor 5010, 5012, 5014 may move and therefore some may remain fixed in place and used for detection of reference phase or the like.

In embodiments, a multiplex (mux) 5032 may be used to switch to the next collection of points, to a mixture of the two methods or collection patterns that may be combined, other predetermined routes, and the like. The multiplexer 5032 may be stackable so as to be laddered and effectively accept more channels than the DAQ instrument 5002 provides. In examples, the DAQ instrument 5002 may provide eight channels while the multiplexer 5032 may be stacked to supply 32 channels. Further variations are possible with one more multiplexers. In embodiments, the multiplexer 5032 may be fed into the DAQ instrument 5002 through an instrument input 5034. In embodiments, the DAQ instrument 5002 may include a controller 5038 that may take the form of an onboard controller, a PC, other connected devices, network based services, and combinations thereof.

In embodiments, the sequence and panel conditions used to govern the data collection process may be obtained from the multimedia probe (MMP) and probe control, sequence and analytical (PCSA) information store 5040. In embodiments, the information store 5040 may be onboard the DAQ instrument 5002. In embodiments, contents of the information store 5040 may be obtained through a cloud network facility, from other DAQ instruments, from other connected devices, from the machine being sensed, other relevant sources, and combinations thereof. In embodiments, the information store 5040 may include such items as the hierarchical structural relationships of the machine, e.g., a machine contains predetermined pieces of equipment, each of which may contain one or more shafts and each of those shafts may have multiple associated bearings. Each of those types of bearings may be monitored by specific types of transducers or probes, according to one or more specific prescribed sequences (paths, routes, and the like) and with one or more specific panel conditions that may be set on the one or more DAQ instruments 5002. By way of this example, the panel conditions may include hardware specific switch settings or other collection parameters. In many examples, collection parameters include but are not limited to a sampling rate, AC/DC coupling, voltage range and gain, integration, high and low pass filtering, anti-aliasing filtering, ICP™ transducers and other integrated-circuit piezoelectric transducers, 4-20 mA loop sensors, and the like. In embodiments, the information store 5040 may also include machinery specific features that may be important for proper analysis such as gear teeth for a gear, number blades in a pump impeller, number of motor rotor bars, bearing specific parameters necessary for calculating bearing frequencies, revolution per minutes information of all rotating elements and multiples of those RPM ranges, and the like. Information in the information store may also be used to extract stream data 5050 for permanent storage.

Based on directions from the DAQ API software 5052, digitized waveforms may be uploaded using DAQ driver services 5054 of a driver onboard the DAQ instrument 5002. In embodiments, data may then be fed into a raw data server 5058 which may store the stream data 5050 in a stream data repository 5060. In embodiments, this data storage area is typically meant for storage until the data is copied off of the DAQ instrument 5002 and verified. The DAQ API 5052 may also direct the local data control application 5062 to extract and process the recently obtained stream data 5050 and convert it to the same or lower sampling rates of sufficient length to effect one or more desired resolutions. By way of these examples, this data may be converted to spectra, averaged, and processed in a variety of ways and stored, at least temporarily, as extracted/processed (EP) data 5064. It will be appreciated in light of the disclosure that legacy data may require its own sampling rates and resolution to ensure compatibility and often this sampling rate may not be integer proportional to the acquired sampling rate. It will also be appreciated in light of the disclosure that this may be especially relevant for order-sampled data whose sampling frequency is related directly to an external frequency (typically the running speed of the machine or its local componentry) rather than the more-standard sampling rates employed by the internal crystals, clock functions, or the like of the DAQ instrument (e.g., values of Fmax of 100, 200, 500, 1K, 2K, 5K, 10K, 20K, and so on).

In embodiments, the extract/process (EP) align module 5068 of the local data control application 5062 may be able to fractionally adjust the sampling rates to these non-integer ratio rates satisfying an important requirement for making data compatible with legacy systems. In embodiments, fractional rates may also be converted to integer ratio rates more readily because the length of the data to be processed may be adjustable. It will be appreciated in light of the disclosure that if the data was not streamed and just stored as spectra with the standard or predetermined Fmax, it may be impossible in certain situations to convert it retroactively and accurately to the order-sampled data. It will also be appreciated in light of the disclosure that internal identification issues may also need to be reconciled. In many examples, stream data may be converted to the proper sampling rate and resolution as described and stored (albeit temporarily) in an EP legacy data repository 5070 to ensure compatibility with legacy data.

To support legacy data identification issues, a user input module 5072 is shown in many embodiments should there be no automated process (whether partially or wholly) for identification translation. In such examples, one or more legacy systems (i.e., pre-existing data acquisition) may be characterized in that the data to be imported is in a fully standardized format such as a Mimosa™ format, and other similar formats. Moreover, sufficient indentation of the legacy data and/or the one or more machines from which the legacy data was produced may be required in the completion of an identification mapping table 5074 to associate and link a portion of the legacy data to a portion of the newly acquired streamed data 5050. In many examples, the end user and/or legacy vendor may be able to supply sufficient information to complete at least a portion of a functioning identification (ID) mapping table 5074 and therefore may provide the necessary database schema for the raw data of the legacy system to be used for comparison, analysis, and manipulation of newly streamed data 5050.

In embodiments, the local data control application 5062 may also direct streaming data as well as extracted/processed (EP) data to a cloud network facility 5080 via wired or wireless transmission. From the cloud network facility 5080 other devices may access, receive, and maintain data including the data from a master raw data server (MRDS) 5082. The movement, distribution, storage, and retrieval of data remote to the DAQ instrument 5002 may be coordinated by the cloud data management services ("CDMS") 5084.

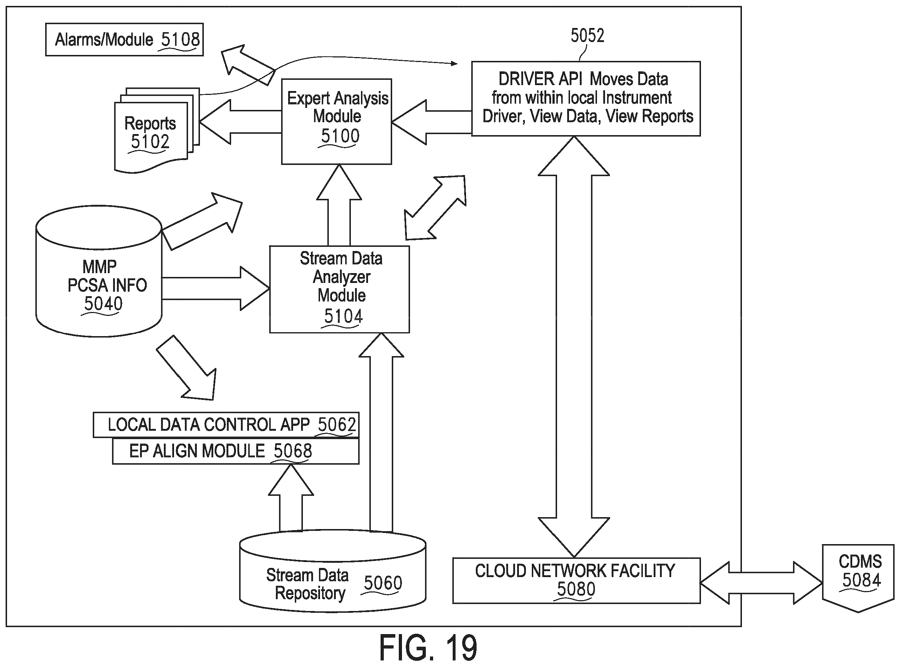

Figure 19 shows additional methods and systems that include the DAQ instrument 5002 accessing related cloud based services. In embodiments, the DAQ API 5052 may control the data collection process as well as its sequence. By way of these examples, the DAQ API 5052 may provide the capability for editing processes, viewing plots of the data, controlling the processing of that data, viewing the output data in all its myriad forms, analyzing this data including expert analysis, and communicating with external devices via the local data control application 5062 and with the CDMS 5084 via the cloud network facility 5080. In embodiments, the DAQ API 5052 may also govern the movement of data, its filtering, as well as many other housekeeping functions.

In embodiments, an expert analysis module 5100 may generate reports 5102 that may use machine or measurement point specific information from the information store 5040 to analyze the stream data 5050 using a stream data analyzer module 5104 and the local data control application 5062 with the extract/process ("EP") align module 5068. In embodiments, the expert analysis module 5100 may generate new alarms or ingest alarm settings into an alarms module 5108 that is relevant to the stream data 5050. In embodiments, the stream data analyzer module 5104 may provide a manual or automated mechanism for extracting meaningful information from the stream data 5050 in a variety of plotting and report formats. In embodiments, a supervisory control of the expert analysis module 5100 is provided by the DAQ API 5052. In further examples, the expert analysis module 5100 may be supplied (wholly or partially) via the cloud network facility 5080. In many examples, the expert analysis module 5100 via the cloud may be used rather than a locally-deployed expert analysis module 5100 for various reasons such as using the most up-to-date software version, more processing capability, a bigger volume of historical data to reference, and so on. In many examples, it may be important that the expert analysis module 5100 be available when an internet connection cannot be established so having this redundancy may be crucial for seamless and time efficient operation. Toward that end, many of the modular software applications and databases available to the DAQ instrument 5002 where applicable may be implemented with system component redundancy to provide operational robustness to provide connectivity to cloud services when needed but also operate successfully in isolated scenarios where connectivity is not available and sometime not available purposefully to increase security and the like.

In embodiments, the DAQ instrument acquisition may require a real time operating system ("RTOS") for the hardware especially for streamed gap-free data that is acquired by a PC. In some instances, the requirement for a RTOS may result in (or may require) expensive custom hardware and software capable of running such a system. In many embodiments, such expensive custom hardware and software may be avoided and an RTOS may be effectively and sufficiently implemented using a standard Windows™ operating systems or similar environments including the system interrupts in the procedural flow of a dedicated application included in such operating systems.

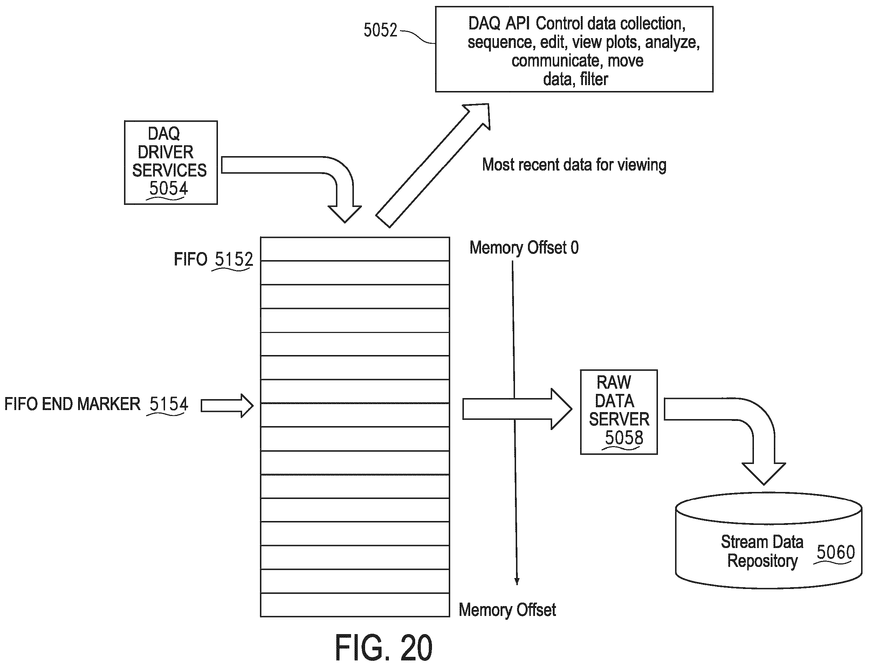

The methods and systems disclosed herein may include, connect to, or be integrated with one or more DAQ instruments and in the many embodiments, Figure 20 shows methods and systems 5150 that include the DAQ instrument 5002 (also known as a streaming DAQ or an SDAQ). In embodiments, the DAQ instrument 5002 may effectively and sufficiently implement an RTOS using standard windows operating system (or other similar personal computing systems) that may include a software driver configured with a First In, First Out (FIFO) memory area 5152. The FIFO memory area 5152 may be maintained and hold information for a sufficient amount of time to handle a worst-case interrupt that it may face from the local operating system to effectively provide the RTOS. In many examples, configurations on a local personal computer or connected device may be maintained to minimize operating system interrupts. To support this, the configurations may be maintained, controlled, or adjusted to eliminate (or be isolated from) any exposure to extreme environments where operating system interrupts may become an issue. In embodiments, the DAQ instrument 5002 may produce a notification, alarm, message, or the like to notify a user when any gap errors are detected. In these many examples, such errors may be shown to be rare and even if they occur, the data may be adjusted knowing when they occurred should such a situation arise.

In embodiments, the DAQ instrument 5002 may maintain a sufficiently large FIFO memory area 5152 that may buffer the incoming data so as to be not affected by operating system interrupts when acquiring data. It will be appreciated in light of the disclosure that the predetermined size of the FIFO memory area 5152 may be based on operating system interrupts that may include Windows system and application functions such as the writing of data to Disk or SSD, plotting, GUI interactions and standard Windows tasks, low-level driver tasks such as servicing the DAQ hardware and retrieving the data in bursts, and the like.

In embodiments, the computer, controller, connected device or the like that may be included in the DAQ instrument 5002 may be configured to acquire data from the one or more hardware devices over a USB port, firewire, ethernet, or the like. In embodiments, the DAQ driver services 5054 may be configured to have data delivered to it periodically so as to facilitate providing a channel specific FIFO memory buffer that may be configured to not miss data, i.e., it is gap-free. In embodiments, the DAQ driver services 5054 may be configured so as to maintain an even larger (than the device) channel specific FIFO area 5152 that it fills with new data obtained from the device. In embodiments, the DAQ driver services 5054 may be configured to employ a further process in that the raw data server 5058 may take data from the FIFO 5110 and may write it as a contiguous stream to non-volatile storage areas such as the stream data repository 5060 that may be configured as one or more disk drives, SSDs, or the like. In embodiments, the FIFO 5110 may be configured to include a starting and stopping marker or pointer to mark where the latest most current stream was written. By way of these examples, a FIFO end marker 5114 may be configured to mark the end of the most current data until it reaches the end of the spooler and then wraps around constantly cycling around. In these examples, there is always one megabyte (or other configured capacities) of the most current data available in the FIFO 5110 once the spooler fills up. It will be appreciated in light of the disclosure that further configurations of the FIFO memory area may be employed. In embodiments, the DAQ driver services 5054 may be configured to use the DAQ API 5052 to pipe the most recent data to a high-level application for processing, graphing and analysis purposes. In some examples, it is not required that this data be gap-free but even in these instances, it is helpful to identify and mark the gaps in the data. Moreover, these data updates may be configured to be frequent enough so that the user would perceive the data as live. In the many embodiments, the raw data is flushed to non-volatile storage without a gap at least for the prescribed amount of time and examples of the prescribed amount of time may be about thirty seconds to over four hours. It will be appreciated in light of the disclosure that many pieces of equipment and their components may contribute to the relative needed duration of the stream of gap-free data and those durations may be over four hours when relatively low speeds are present in large numbers, when non-periodic transient activity is occurring on a relatively long time frame, when duty cycle only permits operation in relevant ranges for restricted durations and the like.

With reference to Figure 19, the stream data analyzer module 5104 may provide for the manual or extraction of information from the data stream in a variety of plotting and report formats. In embodiments, resampling, filtering (including anti-aliasing), transfer functions, spectrum analysis, enveloping, averaging, peak detection functionality, as well as a host of other signal processing tools, may be available for the analyst to analyze the stream data and to generate a very large array of snapshots. It will be appreciated in light of the disclosure that much larger arrays of snapshots are created than ever would have been possible by scheduling the collection of snapshots beforehand, i.e., during the initial data acquisition for the measurement point in question.

It will be appreciated in light of the disclosure that the sampling rates of vibration data of up to 100 kHz (or higher in some scenarios) may be utilized for non-vibration sensors as well. In doing so, it will further be appreciated in light of the disclosure that stream data in such durations at these sampling rates may uncover new patterns to be analyzed due in no small part that many of these types of sensors have not been utilized in this manner. It will also be appreciated in light of the disclosure that different sensors used in machinery condition monitoring may provide measurements more akin to static levels rather than fast-acting dynamic signals. In some cases, faster response time transducers may have to be used prior to achieving the faster sampling rates.

In many embodiments, sensors may have a relatively static output such as temperature, pressure, or flow but may still be analyzed with the dynamic signal processing system and methodologies as disclosed herein. It will be appreciated in light of the disclosure that the time scale, in many examples, may be slowed down. In many examples, a collection of temperature readings collected approximately every minute for over two weeks may be analyzed for their variation solely or in collaboration or in fusion with other relevant sensors. By way of these examples, the direct current level or average level may be omitted from all the readings (e.g., by subtraction) and the resulting delta measurements may be processed (e.g., through a Fourier transform). From these examples, resulting spectral lines may correlate to specific machinery behavior or other symptoms present in industrial system processes. In further examples, other techniques include enveloping that may look for modulation, wavelets that may look for spectral patterns that last only for a short time (e.g., bursts), cross-channel analysis to look for correlations with other sensors including vibration, and the like.

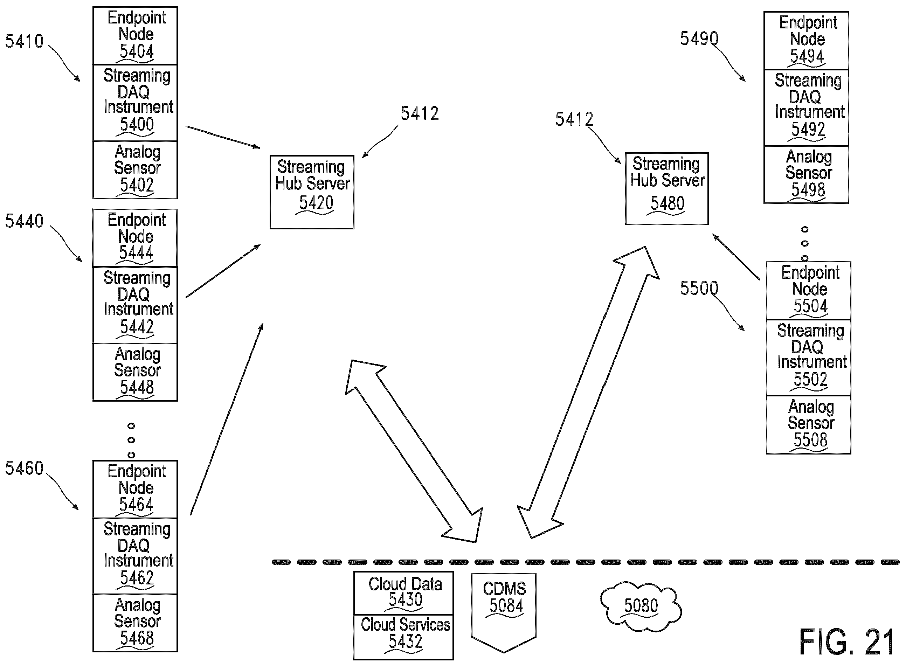

Figure 21 shows a DAQ instrument 5400 that may be integrated with one or more analog sensors 5402 and endpoint nodes 5404 to provide a streaming sensor 5410 or smart sensors that may take in analog signals and then process and digitize them, and then transmit them to one or more external monitoring systems 5412 in the many embodiments that may be connected to, interfacing with, or integrated with the methods and systems disclosed herein. The monitoring system 5412 may include a streaming hub server 5420 that may communicate with the CDMS 5084. In embodiments, the CDMS 5084 may contact, use, and integrate with cloud data 5430 and cloud services 5432 that may be accessible through one or more cloud network facilities 5080. In embodiments, the streaming hub server 5420 may connect with another streaming sensor 5440 that may include a DAQ instrument 5442, an endpoint node 5444, and the one or more analog sensors such as analog sensor 5448. The steaming hub server 5420 may connect with other streaming sensors such as the streaming sensor 5460 that may include a DAQ instrument 5462, an endpoint node 5464, and the one or more analog sensors such as analog sensor 5468.

In embodiments, there may be additional streaming hub servers such as the steaming hub server 5480 that may connect with other streaming sensors such as the streaming sensor 5490 that may include a DAQ instrument 5492, an endpoint node 5494, and the one or more analog sensors such as analog sensor 5498. In embodiments, the streaming hub server 5480 may also connect with other streaming sensors such as the streaming sensor 5500 that may include a DAQ instrument 5502, an endpoint node 5504, and the one or more analog sensors such as analog sensor 5508. In embodiments, the transmission may include averaged overall levels and in other examples may include dynamic signal sampled at a prescribed and/or fixed rate. In embodiments, the streaming sensors 5410, 5440, 5460, 5490, and 5500 may be configured to acquire analog signals and then apply signal conditioning to those analog signals including coupling, averaging, integrating, differentiating, scaling, filtering of various kinds, and the like. The streaming sensors 5410, 5440, 5460, 5490, and 5500 may be configured to digitize the analog signals at an acceptable rate and resolution (number of bits) and to process further the digitized signal when required. The streaming sensors 5410, 5440, 5460, 5490, and 5500 may be configured to transmit the digitized signals at predetermined, adjustable, and re-adjustable rates. In embodiments, the streaming sensors 5410, 5440, 5460, 5490, and 5500 are configured to acquire, digitize, process, and transmit data at a sufficient effective rate so that a relatively consistent stream of data may be maintained for a suitable amount of time so that a large number of effective analyses may be shown to be possible. In the many embodiments, there would be no gaps in the data stream and the length of data should be relatively long, ideally for an unlimited amount of time, although practical considerations typically require ending the stream. It will be appreciated in light of the disclosure that this long duration data stream with effectively no gap in the stream is in contrast to the more commonly used burst collection where data is collected for a relatively short period of time (i.e., a short burst of collection), followed by a pause, and then perhaps another burst collection and so on. In the commonly used collections of data collected over noncontiguous bursts, data would be collected at a slow rate for low frequency analysis and high frequency for high frequency analysis. In many embodiments of the present disclosure, in contrast, the streaming data is being collected (i) once, (ii) at the highest useful and possible sampling rate, and (iii) for a long enough time that low frequency analysis may be performed as well as high frequency. To facilitate the collection of the streaming data, enough storage memory must be available on the one or more streaming sensors such as the streaming sensors 5410, 5440, 5460, 5490, 5500 so that new data may be off-loaded externally to another system before the memory overflows. In embodiments, data in this memory would be stored into and accessed from "First-In, First-Out" ("FIFO") mode. In these examples, the memory with a FIFO area may be a dual port so that the sensor controller may write to one part of it while the external system reads from a different part. In embodiments, data flow traffic may be managed by semaphore logic.

It will be appreciated in light of the disclosure that vibration transducers that are larger in mass will have a lower linear frequency response range because the natural resonance of the probe is inversely related to the square root of the mass and will be lowered. Toward that end, a resonant response is inherently non-linear and so a transducer with a lower natural frequency will have a narrower linear passband frequency response. It will also be appreciated in light of the disclosure that above the natural frequency the amplitude response of the sensor will taper off to negligible levels rendering it even more unusable. With that in mind, high frequency accelerometers, for this reason, tend to be quite small in mass, to the order of half of a gram. It will also be appreciated in light of the disclosure that adding the required signal processing and digitizing electronics required for streaming may, in certain situations, render the sensors incapable in many instances of measuring high-frequency activity.

In embodiments, streaming hubs such as the streaming hubs 5420, 5480 may effectively move the electronics required for streaming to an external hub via cable. It will be appreciated in light of the disclosure that the streaming hubs may be located virtually next to the streaming sensors or up to a distance supported by the electronic driving capability of the hub. In instances where an internet cache protocol ("ICP") is used, the distance supported by the electronic driving capability of the hub would be anywhere from 100 to 1000 feet (30.5 to 305 meters) based on desired frequency response, cable capacitance, and the like. In embodiments, the streaming hubs may be positioned in a location convenient for receiving power as well as connecting to a network (be it LAN or WAN). In embodiments, other power options would include solar, thermal as well as energy harvesting. Transfer between the streaming sensors and any external systems may be wireless or wired and may include such standard communication technologies as 802.11 and 900 MHz wireless systems, Ethernet, USB, firewire and so on.

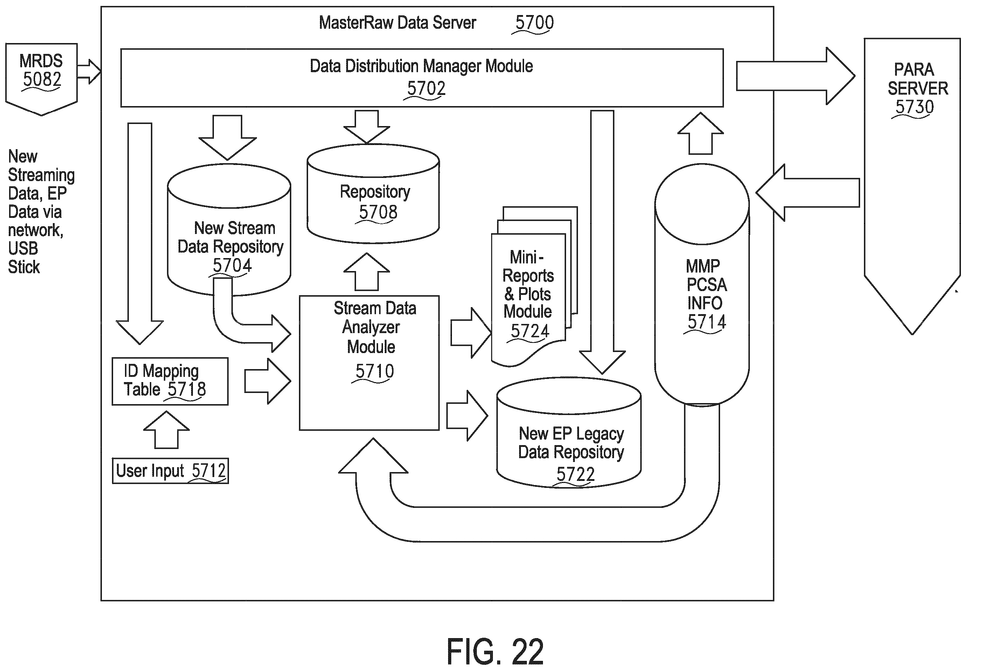

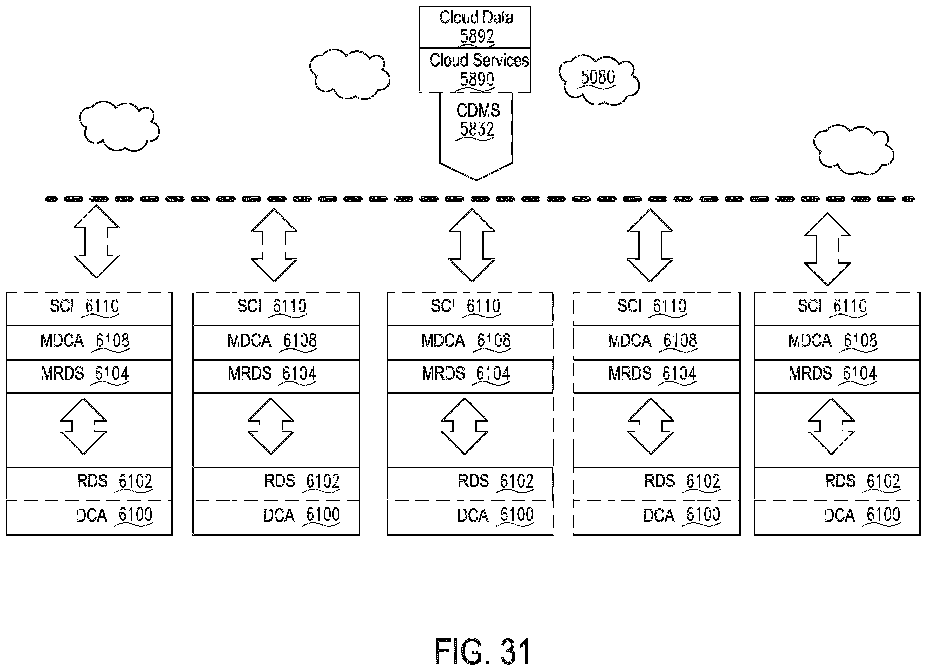

With reference to Figure 18, the many examples of the DAQ instrument 5002 include embodiments where data that may be uploaded from the local data control application 5062 to the master raw data server ("MRDS") 5082. In embodiments, information in the multimedia probe ("MMP") and probe control, sequence and analytical ("PCSA") information store 5040 may also be downloaded from the MRDS 5082 down to the DAQ instrument 5002. Further details of the MRDS 5082 are shown in Figure 22 including embodiments where data may be transferred to the MRDS 5082 from the DAQ instrument 5002 via a wired or wireless network, or through connection to one or more portable media, drive, other network connections, or the like. In embodiments, the DAQ instrument 5002 may be configured to be portable and may be carried on one or more predetermined routes to assess predefined points of measurement. In these many examples, the operating system that may be included in the MRDS 5082 may be Windows™, Linux™, or MacOS™ operating systems, or other similar operating systems. Further, in these arrangements, the operating system, modules for the operating system, and other needed libraries, data storage, and the like may be accessible wholly or partially through access to the cloud network facility 5080. In embodiments, the MRDS 5082 may reside directly on the DAQ instrument 5002, especially in on-line system examples. In embodiments, the DAQ instrument 5002 may be linked on an intra-network in a facility but may otherwise be behind a firewall. In further examples, the DAQ instrument 5002 may be linked to the cloud network facility 5080. In the various embodiments, one of the computers or mobile computing devices may be effectively designated the MRDS 5082 to which all of the other computing devices may feed it data such as one of the MRDS 6104, as depicted in Figures 31 and 32. In the many examples where the DAQ instrument 5002 may be deployed and configured to receive stream data in a swarm environment, one or more of the DAQ instruments 5002 may be effectively designated the MRDS 5082 to which all of the other computing devices may feed it data. In the many examples where the DAQ instrument 5002 may be deployed and configured to receive stream data in an environment where the methods and systems disclosed herein are intelligently assigning, controlling, adjusting, and re-adjusting data pools, computing resources, network bandwidth for local data collection, and the like, one or more of the DAQ instruments 5002 may be effectively designated the MRDS 5082 to which all of the other computing devices may feed it data.

With further reference to Figure 22, new raw streaming data, data that have been through extract, process, and align processes (EP data), and the like may be uploaded to one or more master raw data servers as needed or as scaled in various environments. In embodiments, a master raw data server ("MRDS") 5700 may connect to and receive data from other master raw data servers such as the MRDS 5082. The MRDS 5700 may include a data distribution manager module 5702. In embodiments, the new raw streaming data may be stored in the new stream data repository 5704. In many instances, like raw data streams stored on the DAQ instrument 5002, the new stream data repository 5704 and new extract and process data repository 5708 may be similarly configured as a temporary storage area.

In embodiments, the MRDS 5700 may include a stream data analyzer module with an extract and process alignment module 5710. The analyzer module 5710 may be shown to be a more robust data analyzer and extractor than may be typically found on portable streaming DAQ instruments although it may be deployed on the DAQ instrument 5002 as well. In embodiments, the analyzer module 5710 takes streaming data and instantiates it at a specific sampling rate and resolution similar to the local data control module 5062 on the DAQ instrument 5002. The specific sampling rate and resolution of the analyzer module 5710 may be based on either user input 5712 or automated extractions from a multimedia probe ("MMP") and the probe control, sequence and analytical ("PCSA") information store 5714 and/or an identification mapping table 5718, which may require the user input 5712 if there is incomplete information regarding various forms of legacy data similar to as was detailed with the DAQ instrument 5002. In embodiments, legacy data may be processed with the analyzer module 5710 and may be stored in one or more temporary holding areas such as a new legacy data repository 5720. One or more temporary areas may be configured to hold data until it is copied to an archive and verified. The analyzer 5710 module may also facilitate in-depth analysis by providing many varying types of signal processing tools including but not limited to filtering, Fourier transforms, weighting, resampling, envelope demodulation, wavelets, two-channel analysis, and the like. From this analysis, many different types of plots and mini-reports may be generated from a reports and plots module 5724. In embodiments, data is sent to the processing, analysis, reports, and archiving ("PARA") server 5730 upon user initiation or in an automated fashion especially for on-line systems.

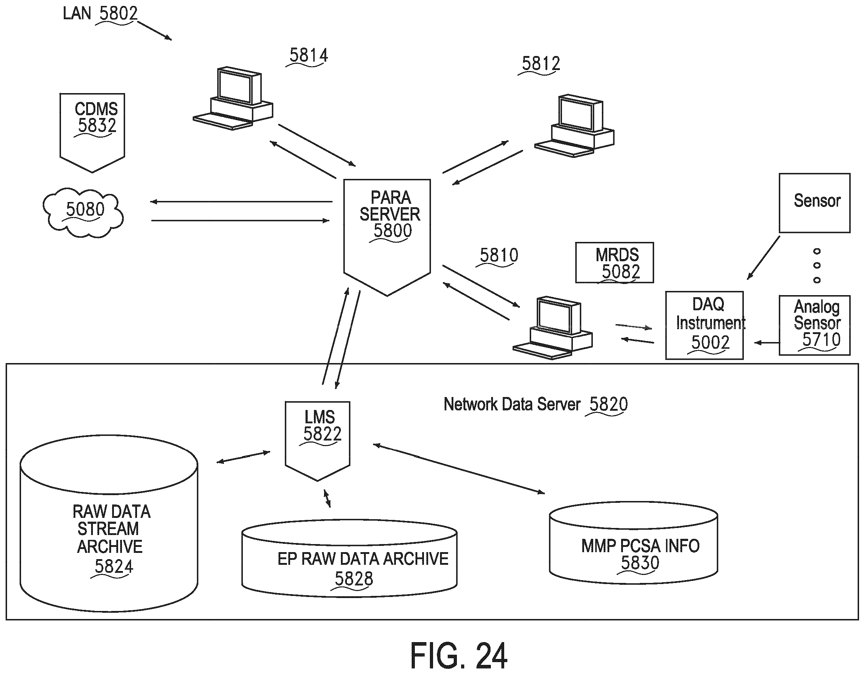

In embodiments, a PARA server 5750 may connect to and receive data from other PARA servers such as the PARA server 5730. With reference to Figure 24, the PARA server 5730 may provide data to a supervisory module 5752 on the PARA server 5750 that may be configured to provide at least one of processing, analysis, reporting, archiving, supervisory, and similar functionalities. The supervisory module 5752 may also contain extract, process align functionality and the like. In embodiments, incoming streaming data may first be stored in a raw data stream archive 5760 after being properly validated. Based on the analytical requirements derived from a multimedia probe ("MMP") and probe control, sequence and analytical ("PCSA") information store 5762 as well as user settings, data may be extracted, analyzed, and stored in an extract and process ("EP") raw data archive 5764. In embodiments, various reports from a reports module 5768 are generated from the supervisory module 5752. The various reports from the reports module 5768 include trend plots of various smart bands, overalls along with statistical patterns, and the like. In embodiments, the reports module 5768 may also be configured to compare incoming data to historical data. By way of these examples, the reports module 5768 may search for and analyze adverse trends, sudden changes, machinery defect patterns, and the like. In embodiments, the PARA server 5750 may include an expert analysis module 5770 from which reports are generated and analysis may be conducted. Upon completion, archived data may be fed to a local master server ("LMS") 5772 via a server module 5774 that may connect to the local area network. In embodiments, archived data may also be fed to the LMS 5772 via a cloud data management server ("CDMS") 5778 through a server module for a cloud network facility 5080. In embodiments, the supervisory module 5752 on the PARA server 5750 may be configured to provide at least one of processing, analysis, reporting, archiving, supervisory, and similar functionalities from which alarms may be generated, rated, stored, modified, reassigned, and the like with an alarm generator module 5782.

Figure 24 depicts various embodiments that include a PARA server 5800 and its connection to LAN 5802. In embodiments, one or more DAQ instruments such as the DAQ instrument 5002 may receive and process analog data from one or more analog sensors 5710 that may be fed into the DAQ instrument 5002. As discussed herein, the DAQ instrument 5002 may create a digital stream of data based on the ingested analog data from the one or more analog sensors. The digital stream from the DAQ instrument 5002 may be uploaded to the MRDS 5082 and from there, it may be sent to the PARA server 5800 where multiple terminals, such as terminal 5810 5812, 5814, may each interface with it or the MRDS 5082 and view the data and/or analysis reports. In embodiments, the PARA server 5800 may communicate with a network data server 5820 that may include a LMS 5822. In these examples, the LMS 5822 may be configured as an optional storage area for archived data. The LMS 5822 may also be configured as an external driver that may be connected to a PC or other computing device that may run the LMS 5822; or the LMS 5822 may be directly run by the PARA server 5800 where the LMS 5822 may be configured to operate and coexist with the PARA server 5800. The LMS 5822 may connect with a raw data stream archive 5824, an extract and process ("EP") raw data archive 5828, and a MMP and probe control, sequence and analytical ("PCSA") information store 5830. In embodiments, a CDMS 5832 may also connect to the LAN 5802 and may also support the archiving of data.

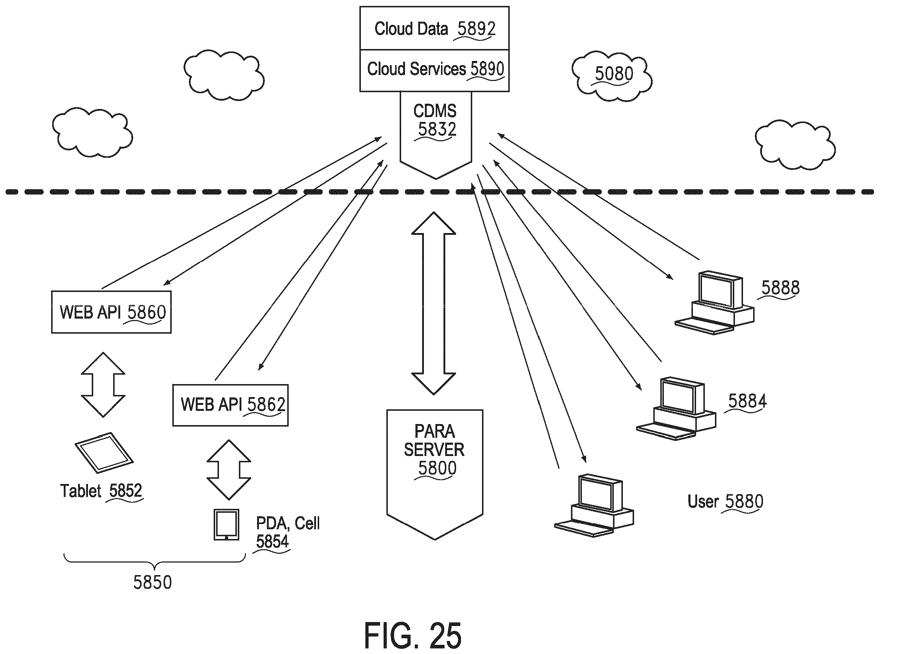

In embodiments, portable connected devices 5850 such as a tablet 5852 and a smart phone 5854 may connect the CDMS 5832 using web APIs 5860 and 5862, respectively, as depicted in Figure 25. The APIs 5860, 5862 may be configured to execute in a browser and may permit access via a cloud network facility 5870 of all (or some of) the functions previously discussed as accessible through the PARA Server 5800. In embodiments, computing devices of a user 5880 such as computing devices 5882, 5884, 5888 may also access the cloud network facility 5870 via a browser or other connection in order to receive the same functionality. In embodiments, thin-client apps which do not require any other device drivers and may be facilitated by web services supported by cloud services 5890 and cloud data 5892. In many examples, the thin-client apps may be developed and reconfigured using, for example, the visual high-level LabVIEW™ programming language with NXG™ Web-based virtual interface subroutines. In embodiments, thin client apps may provide high-level graphing functions such as those supported by LabVIEW™ tools. In embodiments, the LabVIEW™ tools may generate JSCRIPT™ code and JAVA™ code that may be edited post-compilation. The NXG™ tools may generate Web VI's that may not require any specialized driver and only some RESTful™ services which may be readily installed from any browser. It will be appreciated in light of the disclosure that because various applications may be run inside a browser, the applications may be run on any operating system, such as Windows™, Linux™, and Android™ operating systems especially for personal devices, mobile devices, portable connected devices, and the like.

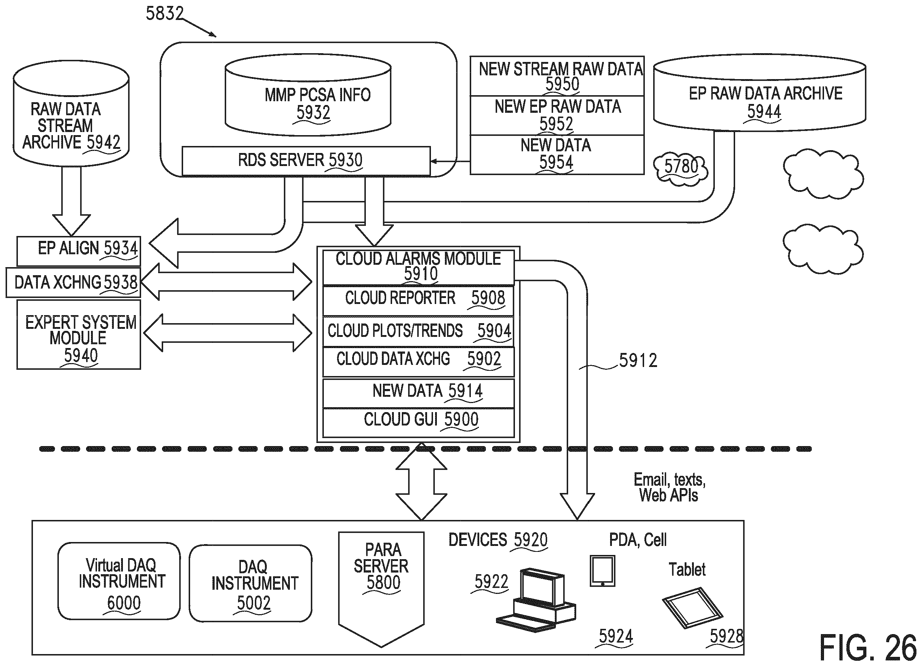

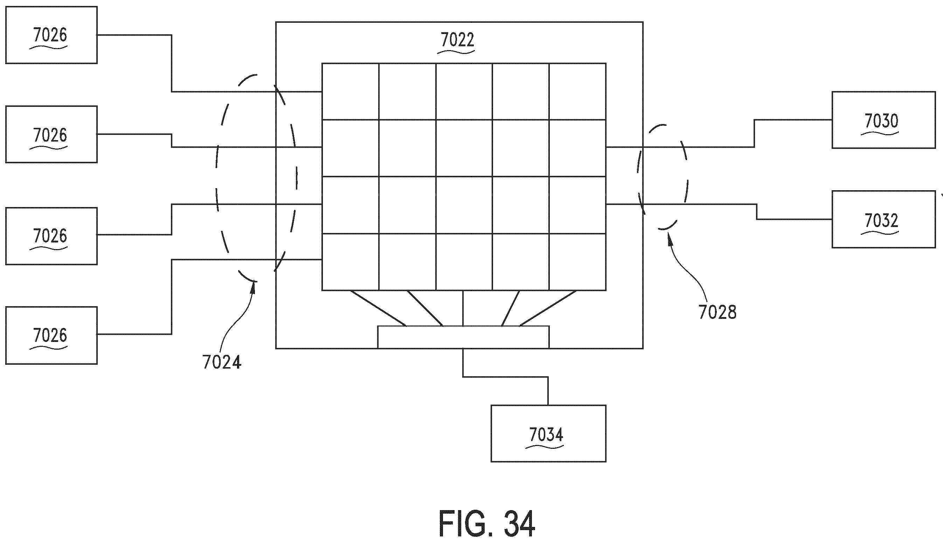

In embodiments, the CDMS 5832 is depicted in greater detail in Figure 26. In embodiments, the CDMS 5832 may provide all of the data storage and services that the PARA Server 5800 (Figure 34) may provide. In contrast, all of the API's may be web API's which may run in a browser and all other apps may run on the PARA Server 5800 or the DAQ instrument 5002 which may typically be Windows™, Linux™ or other similar operating systems. In embodiments, the CDMS 5832 includes at least one of or combinations of the following functions: the CDMS 5832 may include a cloud GUI 5900 that may be configured to provide access to all data plots including trend, waveform, spectra, envelope, transfer function, logs of measurement events, analysis including expert, utilities, and the like. In embodiments, the CDMS 5832 may include a cloud data exchange 5902 configured to facilitate the transfer of data to and from the cloud network facility 5870. In embodiments, the CDMS 5832 may include a cloud plots/trends module 5904 that may be configured to show all plots via web apps including trend, waveform, spectra, envelope, transfer function, and the like. In embodiments, the CDMS 5832 may include a cloud reporter 5908 that may be configured to provide all analysis reports, logs, expert analysis, trend plots, statistical information, and the like. In embodiments, the CDMS 5832 may include a cloud alarm module 5910. Alarms from the cloud alarm module 5910 may be generated and may be sent to various devices 5920 via email, texts, or other messaging mechanisms. From the various modules, data may be stored in new data 5914. The various devices 5920 may include a terminal 5922, portable connected device 5924, or a tablet 5928. The alarms from the cloud alarm module are designed to be interactive so that the end user may acknowledge alarms in order to avoid receiving redundant alarms and also to see significant context-sensitive data from the alarm points that may include spectra, waveform statistical info, and the like.

In embodiments, a relational database server ("RDS") 5930 may be used to access all of the information from a MMP and PCSA information store 5932. As with the PARA server 5800 (Figure 26), information from the information store 5932 may be used with an EP and align module 5934, a data exchange 5938 and the expert system 5940. In embodiments, a raw data stream archive 5942 and extract and process raw data archive 5944 may also be used by the EP align 5934, the data exchange 5938 and the expert system 5940 as with the PARA server 5800. In embodiments, new stream raw data 5950, new extract and process raw data 5952, and new data 5954 (essentially all other raw data such as overalls, smart bands, stats, and data from the information store 5932) are directed by the CDMS 5832.

In embodiments, the streaming data may be linked with the RDS 5930 and the MMP and PCSA information store 5932 using a technical data management streaming ("TDMS") file format. In embodiments, the information store 5932 may include tables for recording at least portions of all measurement events. By way of these examples, a measurement event may be any single data capture, a stream, a snapshot, an averaged level, or an overall level. Each of the measurement events in addition to point identification information may also have a date and time stamp. In embodiments, a link may be made between the streaming data, the measurement event, and the tables in the information store 5932 using the TDMS format. By way of these examples, the link may be created by storing unique measurement point identification codes with a file structure having the TDMS format by including and assigning TDMS properties. In embodiments, a file with the TDMS format may allow for three levels of hierarchy. By way of these examples, the three levels of hierarchy may be root, group, and channel. It will be appreciated in light of the disclosure that the Mimosa™ database schema may be, in theory, unlimited. With that said, there are advantages to limited TDMS hierarchies. In the many examples, the following properties may be proposed for adding to the TDMS Stream structure while using a Mimosa Compatible database schema.

Root Level: Global ID 1: Text String (This could be a unique ID obtained from the web.); Global ID 2: Text String (This could be an additional ID obtained from the web.); Company Name: Text String; Company ID: Text String; Company Segment ID: 4-byte Integer; Company Segment ID: 4-byte Integer; Site Name: Text String; Site Segment ID: 4-byte Integer; Site Asset ID: 4-byte Integer; Route Name: Text String; Version Number: Text String

Group Level: Section 1 Name: Text String; Section 1 Segment ID: 4-byte Integer; Section 1 Asset ID: 4-byte Integer; Section 2 Name: Text String; Section 2 Segment ID: 4-byte Integer; Section 2 Asset ID: 4-byte Integer; Machine Name: Text String; Machine Segment ID: 4-byte Integer; Machine Asset ID: 4-byte Integer; Equipment Name: Text String; Equipment Segment ID: 4-byte Integer; Equipment Asset ID: 4-byte Integer; Shaft Name: Text String; Shaft Segment ID: 4-byte Integer; Shaft Asset ID: 4-byte Integer; Bearing Name: Text String; Bearing Segment ID: 4-byte Integer; Bearing Asset ID: 4-byte Integer; Probe Name: Text String; Probe Segment ID: 4-byte Integer; Probe Asset ID: 4-byte Integer

Channel Level: Channel #: 4-byte Integer; Direction: 4-byte Integer (in certain examples may be text); Data Type: 4-byte Integer; Reserved Name 1: Text String; Reserved Segment ID 1: 4-byte Integer; Reserved Name 2: Text String; Reserved Segment ID 2: 4-byte Integer; Reserved Name 3: Text String; Reserved Segment ID 3: 4-byte Integer

In embodiments, the file with the TDMS format may automatically use property or asset information and may make an index file out of the specific property and asset information to facilitate database searches, may offer a compromise for storing voluminous streams of data because it may be optimized for storing binary streams of data but may also include some minimal database structure making many standard SQL operations feasible, but the TDMS format and functionality discussed herein may not be as efficient as a full-fledged SQL relational database. The TDMS format, however, may take advantage of both worlds in that it may balance between the class or format of writing and storing large streams of binary data efficiently and the class or format of a fully relational database, which facilitates searching, sorting and data retrieval. In embodiments, an optimum solution may be found in that metadata required for analytical purposes and extracting prescribed lists with panel conditions for stream collection may be stored in the RDS 5930 by establishing a link between the two database methodologies. By way of these examples, relatively large analog data streams may be stored predominantly as binary storage in the raw data stream archive 5942 for rapid stream loading but with inherent relational SQL type hooks, formats, conventions, or the like. The files with the TDMS format may also be configured to incorporate DIAdem™ reporting capability of LabVIEW™ software in order to provide a further mechanism to conveniently and rapidly facilitate accessing the analog or the streaming data.

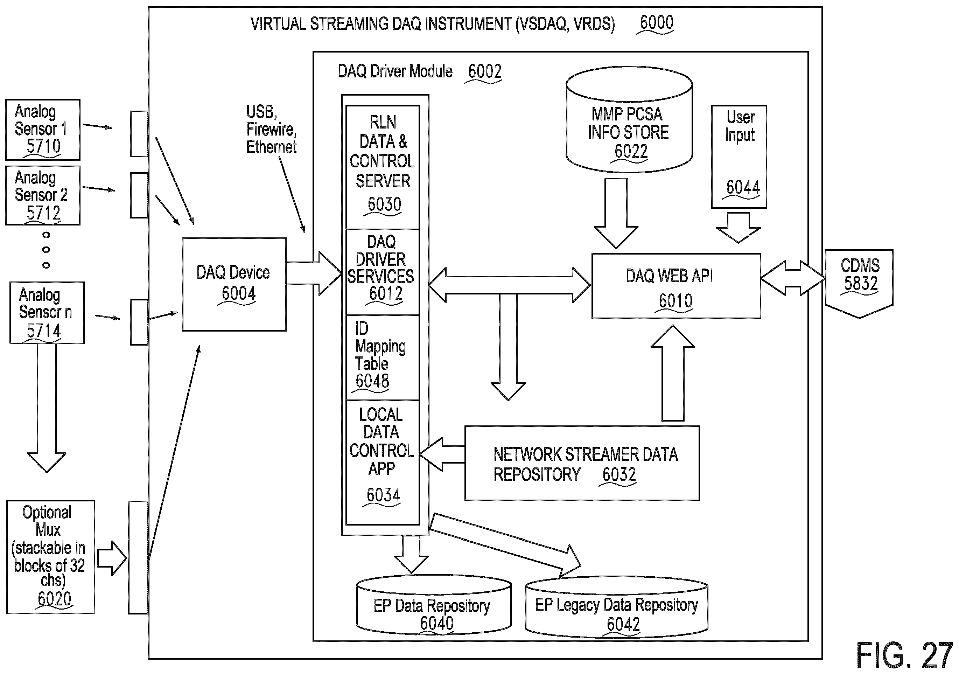

The methods and systems disclosed herein may include, connect to, or be integrated with a virtual data acquisition instrument and in the many embodiments, Figure 27 shows methods and systems that include a virtual streaming DAQ instrument 6000 also known as a virtual DAQ instrument, a VRDS, or a VSDAQ. In contrast to the DAQ instrument 5002 (Figure 18), the virtual DAQ instrument 6000 may be configured so to only include one native application. In the many examples, the one permitted and one native application may be the DAQ driver module 6002 that may manage all communications with the DAQ Device 6004 which may include streaming capabilities. In embodiments, other applications, if any, may be configured as thin client web applications such as RESTful™ web services. The one native application, or other applications or services, may be accessible through the DAQ Web API 6010. The DAQ Web API 6010 may run in or be accessible through various web browsers.

In embodiments, storage of streaming data, as well as the extraction and processing of streaming data into extract and process data, may be handled primarily by the DAQ driver services 6012 under the direction of the DAQ Web API 6010. In embodiments, the output from sensors of various types including vibration, temperature, pressure, ultrasound and so on may be fed into the instrument inputs of the DAQ device 6004. In embodiments, the signals from the output sensors may be signal conditioned with respect to scaling and filtering and digitized with an analog to a digital converter. In embodiments, the signals from the output sensors may be signals from all relevant channels simultaneously sampled at a rate sufficient to perform the maximum desired frequency analysis. In embodiments, the signals from the output sensors may be sampled for a relatively long time, gap-free, as one continuous stream so as to enable a wide array of further post-processing at lower sampling rates with sufficient samples. In further examples, streaming frequency may be adjusted (and readjusted) to record streaming data at non-evenly spaced recording. For temperature data, pressure data, and other similar data that may be relatively slow, varying delta times between samples may further improve quality of the data. By way of the above examples, data may be streamed from a collection of points and then the next set of data may be collected from additional points according to a prescribed sequence, route, path, or the like. In the many examples, the portable sensors may be moved to the next location according to the prescribed sequence but not necessarily all of them as some may be used for reference phase or otherwise. In further examples, a multiplexer 6020 may be used to switch to the next collection of points or a mixture of the two methods may be combined.

In embodiments, the sequence and panel conditions that may be used to govern the data collection process using the virtual DAQ instrument 6000 may be obtained from the MMP PCSA information store 6022. The MMP PCSA information store 6022 may include such items as the hierarchical structural relationships of the machine, i.e., a machine contains pieces of equipment in which each piece of equipment contains shafts and each shaft is associated with bearings, which may be monitored by specific types of transducers or probes according to a specific prescribed sequence (routes, path, etc.) with specific panel conditions. By way of these examples, the panel conditions may include hardware specific switch settings or other collection parameters such as sampling rate, AC/DC coupling, voltage range and gain, integration, high and low pass filtering, anti-aliasing filtering, ICP™ transducers and other integrated-circuit piezoelectric transducers, 4-20 mA loop sensors, and the like. The information store 6022 includes other information that may be stored in what would be machinery specific features that would be important for proper analysis including the number of gear teeth for a gear, the number of blades in a pump impeller, the number of motor rotor bars, bearing specific parameters necessary for calculating bearing frequencies, 1x rotating speed (RPMs) of all rotating elements, and the like.

Upon direction of the DAQ Web API 6010 software, digitized waveforms may be uploaded using the DAQ driver services 6012 of the virtual DAQ instrument 6000. In embodiments, data may then be fed into an RLN data and control server 6030 that may store the stream data into a network stream data repository 6032. Unlike the DAQ instrument 5002, the server 6030 may run from within the DAQ driver module 6002. It will be appreciated in light of the disclosure that a separate application may require drivers for running in the native operating system and for this instrument only the instrument driver may run natively. In many examples, all other applications may be configured to be browser based. As such, a relevant network variable may be very similar to a LabVIEW™ shared or network stream variable which may be designed to be accessed over one or more networks or via web applications.

In embodiments, the DAQ web API 6010 may also direct the local data control application 6034 to extract and process the recently obtained streaming data and, in turn, convert it to the same or lower sampling rates of sufficient length to provide the desired resolution. This data may be converted to spectra, then averaged and processed in a variety of ways and stored as EP data, such as on an EP data repository 6040. The EP data repository 6040 may, in certain embodiments, only be meant for temporary storage. It will be appreciated in light of the disclosure that legacy data may require its own sampling rates and resolution and often this sampling rate may not be integer proportional to the acquired sampling rate especially for order-sampled data whose sampling frequency is related directly to an external frequency. The external frequency may typically be the running speed of the machine or its internal componentry, rather than the more-standard sampling rates produced by the internal crystals, clock functions, and the like of the (e.g., values of Fmax of 100, 200, 500, 1K, 2K, 5K, 10K, 20K and so on) of the DAQ instrument 5002, 6000. In embodiments, the EP align component of the local data control application 6034 is able to fractionally adjust the sampling rate to the non-integer ratio rates that may be more applicable to legacy data sets and therefore drive compatibility with legacy systems. In embodiments, the fractional rates may be converted to integer ratio rates more readily because the length of the data to be processed (or at least that portion of the greater stream of data) is adjustable because of the depth and content of the original acquired streaming data by the DAQ instrument 5002, 6000. It will be appreciated in light of the disclosure that if the data was not streamed and just stored as traditional snap-shots of spectra with the standard values of Fmax, it may very well be impossible to retroactively and accurately convert the acquired data to the order-sampled data. In embodiments, the stream data may be converted, especially for legacy data purposes, to the proper sampling rate and resolution as described and stored in the EP legacy data repository 6042. To support legacy data identification scenarios, a user input 6044 may be included if there is no automated process for identification translation. In embodiments, one such automated process for identification translation may include importation of data from a legacy system that may contain a fully standardized format such as the Mimosa™ format and sufficient identification information to complete an ID Mapping Table 6048. In further examples, the end user, a legacy data vendor, a legacy data storage facility, or the like may be able to supply enough info to complete (or sufficiently complete) relevant portions of the ID Mapping Table 6048 to provide, in turn, the database schema for the raw data of the legacy system so it may be readily ingested, saved, and used for analytics in the current systems disclosed herein.

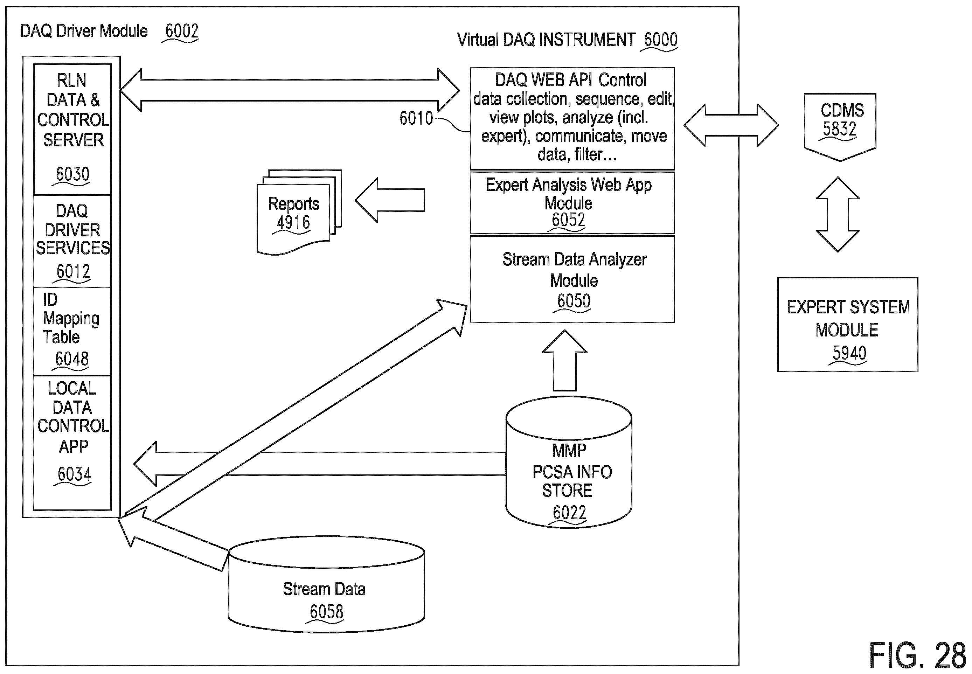

Figure 28 depicts further embodiments and details of the virtual DAQ Instrument 6000. In these examples, the DAQ Web API 6010 may control the data collection process as well as its sequence. The DAQ Web API 6010 may provide the capability for editing this process, viewing plots of the data, controlling the processing of that data and viewing the output in all its myriad forms, analyzing the data, including the expert analysis, communicating with external devices via the DAQ driver module 6002, as well as communicating with and transferring both streaming data and EP data to one or more cloud network facilities 5080 whenever possible. In embodiments, the virtual DAQ instrument itself and the DAQ Web API 6010 may run independently of access to cloud network facilities 5080 when local demands may require or simply as a result of there being no outside connectivity such use throughout a proprietary industrial setting that prevents such signals. In embodiments, the DAQ Web API 6010 may also govern the movement of data, its filtering, as well as many other housekeeping functions.

The virtual DAQ Instrument 6000 may also include an expert analysis module 6052. In embodiments, the expert analysis module 6052 may be a web application or other suitable module that may generate reports 6054 that may use machine or measurement point specific information from the MMP PCSA information store 6022 to analyze stream data 6058 using the stream data analyzer module 6050. In embodiments, supervisory control of the module 6052 may be provided by the DAQ Web API 6010. In embodiments, the expert analysis may also be supplied (or supplemented) via the expert system module 5940 that may be resident on one or more cloud network facilities that are accessible via the CDMS 5832. In many examples, expert analysis via the cloud may be preferred over local systems such as expert analysis module 6052 for various reasons, such as the availability and use of the most up-to-date software version, more processing capability, a bigger volume of historical data to reference and the like. It will be appreciated in light of the disclosure that it may be important to offer expert analysis when an internet connection cannot be established so as to provide a redundancy, when needed, for seamless and time efficient operation. In embodiments, this redundancy may be extended to all of the discussed modular software applications and databases where applicable so each module discussed herein may be configured to provide redundancy to continue operation in the absence of an internet connection.

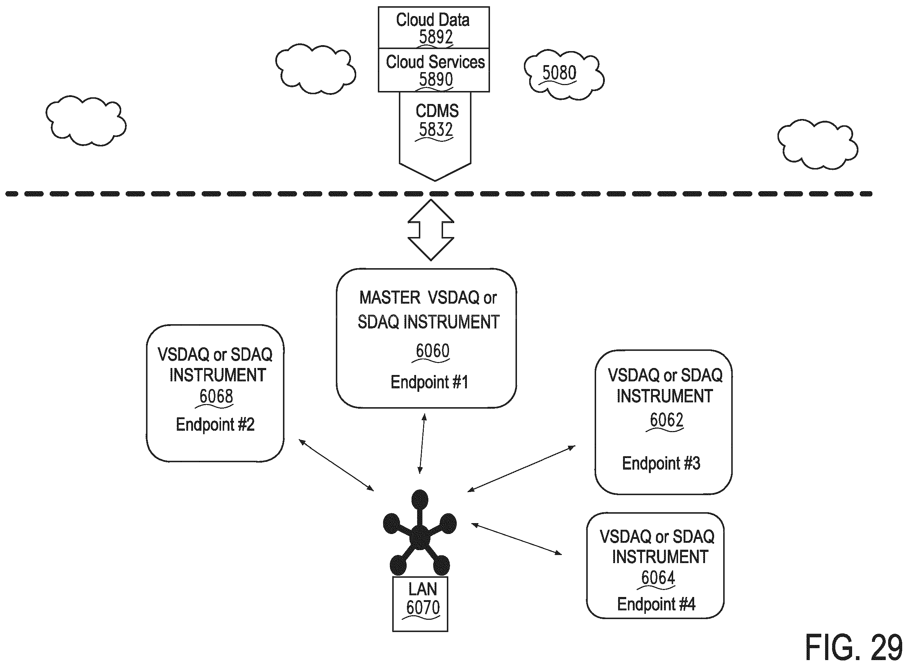

Figure 29 depicts further embodiments and details of many virtual DAQ instruments existing in an online system and connecting through network endpoints through a central DAQ instrument to one or more cloud network facilities. In embodiments, a master DAQ instrument with network endpoint 6060 is provided along with additional DAQ instruments such as a DAQ instrument with network endpoint 6062, a DAQ instrument with network endpoint 6064, and a DAQ instrument with network endpoint 6068. The master DAQ instrument with network endpoint 6060 may connect with the other DAQ instruments with network endpoints 6062, 6064, 6068 over LAN 6070. It will be appreciated that each of the instruments 6060, 6062, 6064, 6068 may include personal computer, a connected device, or the like that include Windows™, Linux™, or other suitable operating systems to facilitate ease of connection of devices utilizing many wired and wireless network options such as Ethernet, wireless 802.11g, 900 MHz wireless (e.g., for better penetration of walls, enclosures and other structural barriers commonly encountered in an industrial setting), as well as a myriad of other things permitted by the use of off-the-shelf communication hardware when needed.

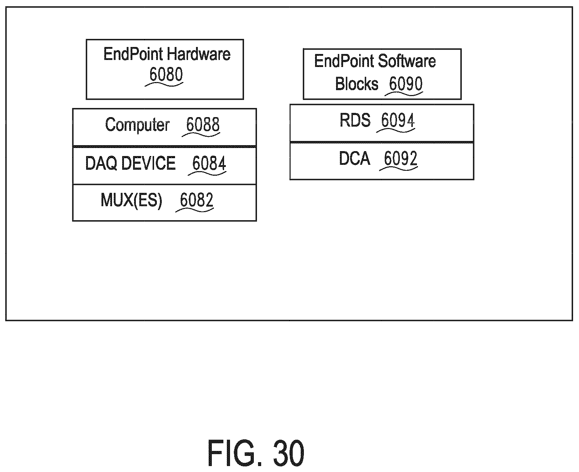

Figure 30 depicts further embodiments and details of many functional components of an endpoint that may be used in the various settings, environments, and network connectivity settings. The endpoint includes endpoint hardware modules 6080. In embodiments, the endpoint hardware modules 6080 may include one or more multiplexers 6082, a DAQ instrument 6084, as well as a computer 6088, computing device, PC, or the like that may include the multiplexers, DAQ instruments, and computers, connected devices and the like, as disclosed herein. The endpoint software modules 6090 include a data collector application (DCA) 6092 and a raw data server (RDS) 6094. In embodiments, DCA 6092 may be similar to the DAQ API 5052 (Figure 18) and may be configured to be responsible for obtaining stream data from the DAQ device 6084 and storing it locally according to a prescribed sequence or upon user directives. In the many examples, the prescribed sequence or user directives may be a LabVIEW™ software app that may control and read data from the DAQ instruments. For cloud based online systems, the stored data in many embodiments may be network accessible. In many examples, LabVIEW™ tools may be used to accomplish this with a shared variable or network stream (or subsets of shared variables). Shared variables and the affiliated network streams may be network objects that may be optimized for sharing data over the network. In many embodiments, the DCA 6092 may be configured with a graphic user interface that may be configured to collect data as efficiently and fast as possible and push it to the shared variable and its affiliated network stream. In embodiments, the endpoint raw data server 6094 may be configured to read raw data from the single-process shared variable and may place it with a master network stream. In embodiments, a raw stream of data from portable systems may be stored locally and temporarily until the raw stream of data is pushed to the MRDS 5082 (Figure 18). It will be appreciated in light of the disclosure that online system instruments on a network can be termed endpoints whether local or remote or associated with a local area network or a wide area network. For portable data collector applications that may or may not be wirelessly connected to one or more cloud network facilities, the endpoint term may be omitted as described so as to detail an instrument that may not require network connectivity.

Figure 31 depicts further embodiments and details of multiple endpoints with their respective software blocks with at least one of the devices configured as master blocks. Each of the blocks may include a data collector application ("DCA") 7000 and a raw data server ("RDS") 7002. In embodiments, each of the blocks may also include a master raw data server module ("MRDS") 7004, a master data collection and analysis module ("MDCA") 7008, and a supervisory and control interface module ("SCI") 7010. The MRDS 7004 may be configured to read network stream data (at a minimum) from the other endpoints and may forward it up to one or more cloud network facilities via the CDMS 5832 including the cloud services 5890 and the cloud data 5892. In embodiments, the CDMS 5832 may be configured to store the data and to provide web, data, and processing services. In these examples, this may be implemented with a LabVIEW™ application that may be configured to read data from the network streams or share variables from all of the local endpoints, write them to the local host PC, local computing device, connected device, or the like, as both a network stream and file with TDMS™ formatting. In embodiments, the CDMS 5832 may also be configured to then post this data to the appropriate buckets using the LabVIEW or similar software that may be supported by S3™ web service from the Amazon Web Services ("AWS™") on the Amazon™ web server, or the like and may effectively serve as a back-end server. In the many examples, different criteria may be enabled or may be set up for when to post data, create or adjust schedules, create or adjust event triggering including a new data event, create a buffer full message, create or more alarms messages, and the like.

In embodiments, the MDCA 7008 may be configured to provide automated as well as user-directed analyses of the raw data that may include tracking and annotating specific occurrence and in doing so, noting where reports may be generated and alarms may be noted. In embodiments, the SCI 7010 may be an application configured to provide remote control of the system from the cloud as well as the ability to generate status and alarms. In embodiments, the SCI 7010 may be configured to connect to, interface with, or be integrated into a supervisory control and data acquisition ("SCADA") control system. In embodiments, the SCI 7010 may be configured as a LabVIEW™ application that may provide remote control and status alerts that may be provided to any remote device that may connect to one or more of the cloud network facilities 5870.

In embodiments, the equipment that is being monitored may include RFID tags that may provide vital machinery analysis background information. The RFID tags may be associated with the entire machine or associated with the individual componentry and may be substituted when certain parts of the machine are replaced, repaired, or rebuilt. The RFID tags may provide permanent information relevant to the lifetime of the unit or may also be re-flashed to update with at least a portion of new information. In many embodiments, the DAQ instruments 5002 disclosed herein may interrogate the one or more RFID chips to learn of the machine, its componentry, its service history, and the hierarchical structure of how everything is connected including drive diagrams, wire diagrams, and hydraulic layouts. In embodiments, some of the information that may be retrieved from the RFID tags includes manufacturer, machinery type, model, serial number, model number, manufacturing date, installation date, lots numbers, and the like. By way of these examples, machinery type may include the use of a Mimosa™ format table including information about one or more of the following motors, gearboxes, fans, and compressors. The machinery type may also include the number of bearings, their type, their positioning, and their identification numbers. The information relevant to one or more fans includes fan type, number of blades, number of vanes, and number of belts. It will be appreciated in light of the disclosure that other machines and their componentry may be similarly arranged hierarchically with relevant information all of which may be available through interrogation of one or more RFID chips associated with the one or more machines.

In embodiments, data collection in an industrial environment may include routing analog signals from a plurality of sources, such as analog sensors, to a plurality of analog signal processing circuits. Routing of analog signals may be accomplished by an analog crosspoint switch that may route any of a plurality of analog input signals to any of a plurality of outputs, such as to analog and/or digital outputs. Routing of inputs to outputs in an analog signal crosspoint switch in an industrial environment may be configurable, such as by an electronic signal to which a switch portion of the analog crosspoint switch is responsive.

In embodiments, the analog crosspoint switch may receive analog signals from a plurality of analog signal sources in the industrial environment. Analog signal sources may include sensors that produce an analog signal. Sensors that produce an analog signal that may be switched by the analog crosspoint switch may include sensors that detect a condition and convert it to an analog signal that may be representative of the condition, such as converting a condition to a corresponding voltage. Exemplary conditions that may be represented by a variable voltage may include temperature, friction, sound, light, torque, revolutions-per-minute, mechanical resistance, pressure, flow rate, and the like, including any of the conditions represented by inputs sources and sensors disclosed throughout this disclosure. Other forms of analog signal may include electrical signals, such as variable voltage, variable current, variable resistance, and the like.

In embodiments, the analog crosspoint switch may preserve one or more aspects of an analog signal being input to it in an industrial environment. Analog circuits integrated into the switch may provide buffered outputs. The analog circuits of the analog crosspoint switch may follow an input signal, such as an input voltage to produce a buffered representation on an output. This may alternatively be accomplished by relays (mechanical, solid state, and the like) that allow an analog voltage or current present on an input to propagate to a selected output of the analog switch.

In embodiments, an analog crosspoint switch in an industrial environment may be configured to switch any of a plurality of analog inputs to any of a plurality of analog outputs. An example embodiment includes a MIMO, multiplexed configuration. An analog crosspoint switch may be dynamically configurable so that changes to the configuration causes a change in the mapping of inputs to outputs. A configuration change may apply to one or more mappings so that a change in mapping may result in one or more of the outputs being mapped to different input than before the configuration change.

In embodiments, the analog crosspoint switch may have more inputs than outputs, so that only a subset of inputs can be routed to outputs concurrently. In other embodiments, the analog crosspoint switch may have more outputs than inputs, so that either a single input may be made available currently on multiple outputs, or at least one output may not be mapped to any input.

In embodiments, an analog crosspoint switch in an industrial environment may be configured to switch any of a plurality of analog inputs to any of a plurality of digital outputs. To accomplish conversion from analog inputs to digital outputs, an analog-to-digital converter circuit may be configured on each input, each output, or at intermediate points between the input(s) and output(s) of the analog crosspoint switch. Benefits of including digitization of analog signals in an analog crosspoint switch that may be located close to analog signal sources may include reducing signal transport costs and complexity that digital signal communication has over analog, reducing energy consumption, facilitating detection and regulation of aberrant conditions before they propagate throughout an industrial environment, and the like. Capturing analog signals close to their source may also facilitate improved signal routing management that is more tolerant of real world effects such as requiring that multiple signals be routed simultaneously. In this example, a portion of the signals can be captured (and stored) locally while another portion can be transferred through the data collection network. Once the data collection network has available bandwidth, the locally stored signals can be delivered, such as with a time stamp indicating the time at which the data was collected. This technique may be useful for applications that have concurrent demand for data collection channels that exceed the number of channels available. Sampling control may also be based on an indication of data worth sampling. As an example, a signal source, such as a sensor in an industrial environment may provide a data valid signal that transmits an indication of when data from the sensor is available.

In embodiments, mapping inputs of the analog crosspoint switch to outputs may be based on a signal route plan for a portion of the industrial environment that may be presented to the crosspoint switch. The signal route plan may be used in a method of data collection in the industrial environment that may include routing a plurality of analog signals along a plurality of analog signal paths. The method may include connecting the plurality of analog signals individually to inputs of the analog crosspoint switch that may be configured with a route plan. The crosspoint switch may, responsively to the configured route plan, route a portion of the plurality of analog signals to a portion of the plurality of analog signal paths.

In embodiments, the analog crosspoint switch may include at least one high current output drive circuit that may be suitable for routing the analog signal along a path that requires high current. In embodiments, the analog crosspoint switch may include at least one voltage-limited input that may facilitate protecting the analog crosspoint switch from damage due to excessive analog input signal voltage. In embodiments, the analog crosspoint switch may include at least one current limited input that may facilitate protecting the analog crosspoint switch from damage due to excessive analog input current. The analog crosspoint switch may comprise a plurality of interconnected relays that may facilitate routing the input(s) to the output(s) with little or no substantive signal loss.

In embodiments, an analog crosspoint switch may include processing functionality, such as signal processing and the like (e.g., a programmed processor, special purpose processor, a digital signal processor, and the like) that may detect one or more analog input signal conditions. In response to such detection, one or more actions may be performed, such as setting an alarm, sending an alarm signal to another device in the industrial environment, changing the crosspoint switch configuration, disabling one or more outputs, powering on or off a portion of the switch, changing a state of an output, such as a general purpose digital or analog output, and the like. In embodiments, the switch may be configured to process inputs for producing a signal on one or more of the outputs. The inputs to use, processing algorithm for the inputs, condition for producing the signal, output to use, and the like may be configured in a data collection template.

In embodiments, an analog crosspoint switch may comprise greater than 32 inputs and greater than 32 outputs. A plurality of analog crosspoint switches may be configured so that even though each switch offers fewer than 32 inputs and 32 outputs it may be configured to facilitate switching any of 32 inputs to any of 32 outputs spread across the plurality of crosspoint switches.

In embodiments, an analog crosspoint switch suitable for use in an industrial environment may comprise four or fewer inputs and four or fewer outputs. Each output may be configurable to produce an analog output that corresponds to the mapped analog input or it may be configured to produce a digital representation of the corresponding mapped input.

In embodiments, an analog crosspoint switch for use in an industrial environment may be configured with circuits that facilitate replicating at least a portion of attributes of the input signal, such as current, voltage range, offset, frequency, duty cycle, ramp rate, and the like while buffering (e.g., isolating) the input signal from the output signal. Alternatively, an analog crosspoint switch may be configured with unbuffered inputs/outputs, thereby effectively producing a bi-directional based crosspoint switch).

In embodiments, an analog crosspoint switch for use in an industrial environment may include protected inputs that may be protected from damaging conditions, such as through use of signal conditioning circuits. Protected inputs may prevent damage to the switch and to downstream devices to which the switch outputs connect. As an example, inputs to such an analog crosspoint switch may include voltage clipping circuits that prevent a voltage of an input signal from exceeding an input protection threshold. An active voltage adjustment circuit may scale an input signal by reducing it uniformly so that a maximum voltage present on the input does not exceed a safe threshold value. As another example, inputs to such an analog crosspoint switch may include current shunting circuits that cause current beyond a maximum input protection current threshold to be diverted through protection circuits rather than enter the switch. Analog switch inputs may be protected from electrostatic discharge and/or lightning strikes. Other signal conditioning functions that may be applied to inputs to an analog crosspoint switch may include voltage scaling circuitry that attempts to facilitate distinguishing between valid input signals and low voltage noise that may be present on the input. However, in embodiments, inputs to the analog crosspoint switch may be unbuffered and/or unprotected to make the least impact on the signal. Signals such as alarm signals, or signals that cannot readily tolerate protection schemes, such as those schemes described above herein may be connected to unbuffered inputs of the analog crosspoint switch.

In embodiments, an analog crosspoint switch may be configured with circuitry, logic, and/or processing elements that may facilitate input signal alarm monitoring. Such an analog crosspoint switch may detect inputs meeting alarm conditions and in response thereto, switch inputs, switch mapping of inputs to outputs, disable inputs, disable outputs, issue an alarm signal, activate-/deactivate a general-purpose output, or the like.

In embodiments, a system for collecting data in an industrial environment may include an analog crosspoint switch that may be adapted to selectively power up or down portions of the analog crosspoint switch or circuitry associated with the analog crosspoint switch, such as input protection devices, input conditioning devices, switch control devices and the like. Portions of the analog crosspoint switch that may be powered on/off may include outputs, inputs, sections of the switch and the like. In an example, an analog crosspoint switch may include a modular structure that may separate portions of the switch into independently powered sections. Based on conditions, such as an input signal meeting a criterion or a configuration value being presented to the analog crosspoint switch, one or more modular sections may be powered on / off.

In embodiments, a system for collecting data in an industrial environment may include an analog crosspoint switch that may be adapted to perform signal processing including, without limitation, providing a voltage reference for detecting an input crossing the voltage reference (e.g., zero volts for detecting zero-crossing signals), a phase-lock loop to facilitate capturing slow frequency signals (e.g., low-speed revolution-per-minute signals and detecting their corresponding phase), deriving input signal phase relative to other inputs, deriving input signal phase relative to a reference (e.g., a reference clock), deriving input signal phase relative to detected alarm input conditions and the like. Other signal processing functions of such an analog crosspoint switch may include oversampling of inputs for delta-sigma A/D, to produce lower sampling rate outputs, to minimize AA filter requirements and the like. Such an analog crosspoint switch may support long block sampling at a constant sampling rate even as inputs are switched, which may facilitate input signal rate independence and reduce complexity of sampling scheme(s). A constant sampling rate may be selected from a plurality of rates that may be produced by a circuit, such as a clock divider circuit that may make available a plurality of components of a reference clock.

In embodiments, a system for collecting data in an industrial environment may include an analog crosspoint switch that may be adapted to support implementing data collection / data routing templates in the industrial environment. The analog crosspoint switch may implement a data collection / data routing template based on conditions in the industrial environment that it may detect or derive, such as an input signal meeting one or more criteria (e.g., transition of a signal from a first condition to a second, lack of transition of an input signal within a predefined time interface (e.g., inactive input) and the like).

In embodiments, a system for collecting data in an industrial environment may include an analog crosspoint switch that may be adapted to be configured from a portion of a data collection template. Configuration may be done automatically (without needing human intervention to perform a configuration action or change in configuration), such as based on a time parameter in the template and the like. Configuration may be done remotely, e.g., by sending a signal from a remote location that is detectable by a switch configuration feature of the analog crosspoint switch. Configuration may be done dynamically, such as based on a condition that is detectable by a configuration feature of the analog crosspoint switch (e.g., a timer, an input condition, an output condition, and the like). In embodiments, information for configuring an analog crosspoint switch may be provided in a stream, as a set of control lines, as a data file, as an indexed data set, and the like. In embodiments, configuration information in a data collection template for the switch may include a list of each input and a corresponding output, a list of each output function (active, inactive, analog, digital and the like), a condition for updating the configuration (e.g., an input signal meeting a condition, a trigger signal, a time (relative to another time/event/state, or absolute), a duration of the configuration, and the like. In embodiments, configuration of the switch may be input signal protocol aware so that switching from a first input to a second input for a given output may occur based on the protocol. In an example, a configuration change may be initiated with the switch to switch from a first video signal to a second video signal. The configuration circuitry may detect the protocol of the input signal and switch to the second video signal during a synchronization phase of the video signal, such as during horizontal or vertical refresh. In other examples, switching may occur when one or more of the inputs are at zero volts. This may occur for a sinusoidal signal that transitions from below zero volts to above zero volts.

In embodiments, a system for collecting data in an industrial environment may include an analog crosspoint switch that may be adapted to provide digital outputs by converting analog signals input to the switch into digital outputs. Converting may occur after switching the analog inputs based on a data collection template and the like. In embodiments, a portion of the switch outputs may be digital and a portion may be analog. Each output, or groups thereof, may be configurable as analog or digital, such as based on analog crosspoint switch output configuration information included in or derived from a data collection template. Circuitry in the analog crosspoint switch may sense an input signal voltage range and intelligently configure an analog-to-digital conversion function accordingly. As an example, a first input may have a voltage range of 12 volts and a second input may have a voltage range of 24 volts. Analog-to-digital converter circuits for these inputs may be adjusted so that the full range of the digital value (e.g., 256 levels for an 8-bit signal) will map substantially linearly to 12 volts for the first input and 24 volts for the second input.

In embodiments, an analog crosspoint switch may automatically configure input circuitry based on characteristics of a connected analog signal. Examples of circuitry configuration may include setting a maximum voltage, a threshold based on a sensed maximum threshold, a voltage range above and/or below a ground reference, an offset reference, and the like. The analog crosspoint switch may also adapt inputs to support voltage signals, current signals, and the like. The analog crosspoint switch may detect a protocol of an input signal, such as a video signal protocol, audio signal protocol, digital signal protocol, protocol based on input signal frequency characteristics, and the like. Other aspects of inputs of the analog crosspoint switch that may be adapted based on the incoming signal may include a duration of sampling of the signal, and comparator or differential type signals, and the like.

In embodiments, an analog crosspoint switch may be configured with functionality to counteract input signal drift and/or leakage that may occur when an analog signal is passed through it over a long period of time without changing value (e.g., a constant voltage). Techniques may include voltage boost, current injection, periodic zero referencing (e.g., temporarily connecting the input to a reference signal, such as ground, applying a high resistance pathway to the ground reference, and the like).

In embodiments, a system for data collection in an industrial environment may include an analog crosspoint switch deployed in an assembly line comprising conveyers and/or lifters. A power roller conveyor system includes many rollers that deliver product along a path. There may be many points along the path that may be monitored for proper operation of the rollers, load being placed on the rollers, accumulation of products, and the like. A power roller conveyor system may also facilitate moving product through longer distances and therefore may have a large number of products in transport at once. A system for data collection in such an assembly environment may include sensors that detect a wide range of conditions as well as at a large number of positions along the transport path. As a product progresses down the path, some sensors may be active and others, such as those that the product has passed maybe inactive. A data collection system may use an analog crosspoint switch to select only those sensors that are currently or anticipated to be active by switching from inputs that connect to inactive sensors to those that connect to active sensors and thereby provide the most useful sensor signals to data detection and/or collection and/or processing facilities. In embodiments, the analog crosspoint switch may be configured by a conveyor control system that monitors product activity and instructs the analog crosspoint switch to direct different inputs to specific outputs based on a control program or data collection template associated with the assembly environment.

In embodiments, a system for data collection in an industrial environment may include an analog crosspoint switch deployed in a factory comprising use of fans as industrial components. In embodiments, fans in a factory setting may provide a range of functions including drying, exhaust management, clean air flow and the like. In an installation of a large number of fans, monitoring fan rotational speed, torque, and the like may be beneficial to detect an early indication of a potential problem with air flow being produced by the fans. However, concurrently monitoring each of these elements for a large number of fans may be inefficient. Therefore, sensors, such as tachometers, torque meters, and the like may be disposed at each fan and their analog output signal(s) may be provided to an analog crosspoint switch. With a limited number of outputs, or at least a limited number of systems that can process the sensor data, the analog crosspoint switch may be used to select among the many sensors and pass along a subset of the available sensor signals to data collection, monitoring, and processing systems. In an example, sensor signals from sensors disposed at a group of fans may be selected to be switched onto crosspoint switch outputs. Upon satisfactory collection and/or processing of the sensor signals for this group of fans, the analog crosspoint switch may be reconfigured to switch signals from another group of fans to be processed.

In embodiments, a system for data collection in an industrial environment may include an analog crosspoint switch deployed as an industrial component in a turbine-based power system. Monitoring for vibration in turbine systems, such as hydro-power systems, has been demonstrated to provide advantages in reduction in down time. However, with a large number of areas to monitor for vibration, particularly for on-line vibration monitoring, including relative shaft vibration, bearings absolute vibration, turbine cover vibration, thrust bearing axial vibration, stator core vibrations, stator bar vibrations, stator end winding vibrations, and the like, it may be beneficial to select among this list over time, such as taking samples from sensors for each of these types of vibration a few at a time. A data collection system that includes an analog crosspoint switch may provide this capability by connecting each vibration sensor to separate inputs of the analog crosspoint switch and configuring the switch to output a subset of its inputs. A vibration data processing system, such as a computer, may determine which sensors to pass through the analog crosspoint switch and configure an algorithm to perform the vibration analysis accordingly. As an example, sensors for capturing turbine cover vibration may be selected in the analog crosspoint switch to be passed on to a system that is configured with an algorithm to determine turbine cover vibration from the sensor signals. Upon completion of determining turbine cover vibration, the crosspoint switch may be configured to pass along thrust bearing axial vibration sensor signals and a corresponding vibration analysis algorithm may be applied to the data. In this way, each type of vibration may be analyzed by a single processing system that works cooperatively with an analog crosspoint switch to pass specific sensor signals for processing.

Referring to Figure 34, an analog crosspoint switch for collecting data in an industrial environment is depicted. The analog crosspoint switch 7022 may have a plurality of inputs 7024 that connect to sensors 7026 in the industrial environment. The analog crosspoint switch 7022 may also comprise a plurality of outputs 7028 that connect to data collection infrastructure, such as analog-to-digital converters 7030, analog comparators 7032, and the like. The analog crosspoint switch 7022 may facilitate connecting one or more inputs 7024 to one or more outputs 7028 by interpreting a switch control value that may be provided to it by a controller 7034 and the like.

An example system for data collection in an industrial environment comprising includes analog signal sources that each connect to at least one input of an analog crosspoint switch including a plurality of inputs and a plurality of outputs; where the analog crosspoint switch is configurable to switch a portion of the input signal sources to a plurality of the outputs.

2. In certain embodiments, the analog crosspoint switch further includes an analog-to-digital converter that converts a portion of analog signals input to the crosspoint switch into representative digital signals; a portion of the outputs including analog outputs and a portion of the outputs comprises digital outputs; and/or where the analog crosspoint switch is adapted to detect one or more analog input signal conditions. Any one or more of the example embodiments include the analog input signal conditions including a voltage range of the signal, and where the analog crosspoint switch responsively adjusts input circuitry to comply with detected voltage range.

An example system of data collection in an industrial environment includes a number of industrial sensors that produce analog signals representative of a condition of an industrial machine in the environment being sensed by the number of industrial sensors, a crosspoint switch that receives the analog signals and routes the analog signals to separate analog outputs of the crosspoint switch based on a signal route plan presented to the crosspoint switch. In certain embodiments, the analog crosspoint switch further includes an analog-to-digital converter that converts a portion of analog signals input to the crosspoint switch into representative digital signals; where a portion of the outputs include analog outputs and a portion of the outputs include digital outputs; where the analog crosspoint switch is adapted to detect one or more analog input signal conditions; where the one or more analog input signal conditions include a voltage range of the signal, and/or where the analog crosspoint switch responsively adjusts input circuitry to comply with detected voltage range.

An example method of data collection in an industrial environment includes routing a number of analog signals along a plurality of analog signal paths by connecting the plurality of analog signals individually to inputs of an analog crosspoint switch, configuring the analog crosspoint switch with data routing information from a data collection template for the industrial environment routing, and routing with the configured analog crosspoint switch a portion of the number of analog signals to a portion the plurality of analog signal paths. In certain further embodiments, at least one output of the analog crosspoint switch includes a high current driver circuit; at least one input of the analog crosspoint switch includes a voltage limiting circuit; and/or at least one input of the analog crosspoint switch includes a current limiting circuit. In certain further embodiments, the analog crosspoint switch includes a number of interconnected relays that facilitate connecting any of a number of inputs to any of a plurality of outputs; the analog crosspoint switch further including an analog-to-digital converter that converts a portion of analog signals input to the crosspoint switch into a representative digital signal; the analog crosspoint switch further including signal processing functionality to detect one or more analog input signal conditions, and in response thereto, to perform an action (e.g., set an alarm, change switch configuration, disable one or more outputs, power off a portion of the switch, change a state of a general purpose (digital / analog) output, etc.); where a portion of the outputs are analog outputs and a portion of the outputs are digital outputs; where the analog crosspoint switch is adapted to detect one or more analog input signal conditions; where the analog crosspoint switch is adapted to take one or more actions in response to detecting the one or more analog input signal conditions, the one more actions including setting an alarm, sending an alarm signal, changing a configuration of the analog crosspoint switch, disabling an output, powering off a portion of the analog crosspoint switch, powering on a portion of the analog crosspoint switch, and/or controlling a general purpose output of the analog crosspoint switch.

An example system includes a power roller of a conveyor, including any of the described operations of an analog crosspoint switch. Without limitation, further example embodiments includes sensing conditions of the power roller by the sensors to determine a rate of rotation of the power roller, a load being transported by the power roller, power being consumed by the power roller, and/or a rate of acceleration of the power roller. An example system includes a fan in a factory setting, including any of the described operations of an analog crosspoint switch. Without limitation, certain further embodiments include sensors disposed to sense conditions of the fan, including a fan blade tip speed, torque, back pressure, RPMs, and/or a volume of air per unit time displaced by the fan. An example system includes a turbine in a power generation environment, including any of the described operations of an analog crosspoint switch. Without limitation, certain further embodiments include a number of sensors disposed to sense conditions of the turbine, where the sensed conditions include a relative shaft vibration, an absolute vibration of bearings, a turbine cover vibration, a thrust bearing axial vibration, vibrations of stators or stator cores, vibrations of stator bars, and/or vibrations of stator end windings.

In embodiments, methods and systems of data collection in an industrial environment may include a plurality of industrial condition sensing and acquisition modules that may include at least one programmable logic component per module that may control a portion of the sensing and acquisition functionality of its module. The programmable logic components on each of the modules may be interconnected by a dedicated logic bus that may include data and control channels. The dedicated logic bus may extend logically and/or physically to other programmable logic components on other sensing and acquisition modules. In embodiments, the programmable logic components may be programmed via the dedicated interconnection bus, via a dedicated programming portion of the dedicated interconnection bus, via a program that is passed between programmable logic components, sensing and acquisition modules, or whole systems. A programmable logic component for use in an industrial environment data sensing and acquisition system may be a Complex Programmable Logic Device, an Application-Specific Integrated Circuit, microcontrollers, and combinations thereof.

A programmable logic component in an industrial data collection environment may perform control functions associated with data collection. Control examples include power control of analog channels, sensors, analog receivers, analog switches, portions of logic modules (e.g., a logic board, system, and the like) on which the programmable logic component is disposed, self-power-up/down, self-sleep/wake up, and the like. Control functions, such as these and others, may be performed in coordination with control and operational functions of other programmable logic components, such as other components on a single data collection module and components on other such modules. Other functions that a programmable logic component may provide may include generation of a voltage reference, such as a precise voltage reference for input signal condition detection. A programmable logic component may generate, set, reset, adjust, calibrate, or otherwise determine the voltage of the reference, its tolerance, and the like. Other functions of a programmable logic component may include enabling a digital phase lock loop to facilitate tracking slowly transitioning input signals, and further to facilitate detecting the phase of such signals. Relative phase detection may also be implemented, including phase relative to trigger signals, other analog inputs, on-board references (e.g., on-board timers), and the like. A programmable logic component may be programmed to perform input signal peak voltage detection and control input signal circuitry, such as to implement auto-scaling of the input to an operating voltage range of the input. Other functions that may be programmed into a programmable logic component may include determining an appropriate sampling frequency for sampling inputs independently of their operating frequencies. A programmable logic component may be programmed to detect a maximum frequency among a plurality of input signals and set a sampling frequency for each of the input signals that is greater than the detected maximum frequency.

A programmable logic component may be programmed to configure and control data routing components, such as multiplexers, crosspoint switches, analog-to-digital converters, and the like, to implement a data collection template for the industrial environment. A data collection template may be included in a program for a programmable logic component. Alternatively, an algorithm that interprets a data collection template to configure and control data routing resources in the industrial environment may be included in the program.

In embodiments, one or more programmable logic components in an industrial environment may be programmed to perform smart-band signal analysis and testing. Results of such analysis and testing may include triggering smart band data collection actions, that may include reconfiguring one or more data routing resources in the industrial environment. A programmable logic component may be configured to perform a portion of smart band analysis, such as collection and validation of signal activity from one or more sensors that may be local to the programmable logic component. Smart band signal analysis results from a plurality of programmable logic components may be further processed by other programmable logic components, servers, machine learning systems, and the like to determine compliance with a smart band.

In embodiments, one or more programmable logic components in an industrial environment may be programmed to control data routing resources and sensors for outcomes, such as reducing power consumption (e.g., powering on/off resources as needed), implementing security in the industrial environment by managing user authentication, and the like. In embodiments, certain data routing resources, such as multiplexers and the like, may be configured to support certain input signal types. A programmable logic component may configure the resources based on the type of signals to be routed to the resources. In embodiments, the programmable logic component may facilitate coordination of sensor and data routing resource signal type matching by indicating to a configurable sensor a protocol or signal type to present to the routing resource. A programmable logic component may facilitate detecting a protocol of a signal being input to a data routing resource, such as an analog crosspoint switch and the like. Based on the detected protocol, the programmable logic component may configure routing resources to facilitate support and efficient processing of the protocol. In an example, a programmable logic component configured data collection module in an industrial environment may implement an intelligent sensor interface specification, such as IEEE 1451.2 intelligent sensor interface specification.

In embodiments, distributing programmable logic components across a plurality of data sensing, collection, and/or routing modules in an industrial environment may facilitate greater functionality and local interoperational control. In an example, modules may perform operational functions independently based on a program installed in one or more programmable logic components associated with each module. Two modules may be constructed with substantially identical physical components, but may perform different functions in the industrial environment based on the program(s) loaded into programmable logic component(s) on the modules. In this way, even if one module were to experience a fault, or be powered down, other modules may continue to perform their functions due at least in part to each having its own programmable logic component(s). In embodiments, configuring a plurality of programmable logic components distributed across a plurality of data collection modules in an industrial environment may facilitate scalability in terms of conditions in the environment that may be sensed, the number of data routing options for routing sensed data throughout the industrial environment, the types of conditions that may be sensed, the computing capability in the environment, and the like.

In embodiments, a programmable logic controller-configured data collection and routing system may facilitate validation of external systems for use as storage nodes, such as for a distributed ledger, and the like. A programmable logic component may be programmed to perform validation of a protocol for communicating with such an external system, such as an external storage node.

In embodiments, programming of programmable logic components, such as CPLDs and the like may be performed to accommodate a range of data sensing, collection and configuration differences. In embodiments, reprogramming may be performed on one or more components when adding and/or removing sensors, when changing sensor types, when changing sensor configurations or settings, when changing data storage configurations, when embedding data collection template(s) into device programs, when adding and/or removing data collection modules (e.g., scaling a system), when a lower cost device is used that may limit functionality or resources over a higher cost device, and the like. A programmable logic component may be programmed to propagate programs for other programmable components via a dedicated programmable logic device programming channel, via a daisy chain programming architecture, via a mesh of programmable logic components, via a hub-and-spoke architecture of interconnected components, via a ring configuration (e.g., using a communication token, and the like).

In embodiments, a system for data collection in an industrial environment comprising distributed programmable logic devices connected by a dedicated control bus may be deployed with drilling machines in an oil and gas harvesting environment, such as an oil and/or gas field. A drilling machine has many active portions that may be operated, monitored, and adjusted during a drilling operation. Sensors to monitor a crown block may be physically isolated from sensors for monitoring a blowout preventer and the like. To effectively maintain control of this wide range and diverse disposition of sensors, programmable logic components, such as Complex Programmable Logic Devices ("CPLD") may be distributed throughout the drilling machine. While each CPLD may be configured with a program to facilitate operation of a limited set of sensors, at least portions of the CPLD may be connected by a dedicated bus for facilitating coordination of sensor control, operation and use. In an example, a set of sensors may be disposed proximal to a mud pump or the like to monitor flow, density, mud tank levels, and the like. One or more CPLD may be deployed with each sensor (or a group of sensors) to operate the sensors and sensor signal routing and collection resources. The CPLD in this mud pump group may be interconnected by a dedicated control bus to facilitate coordination of sensor and data collection resource control and the like. This dedicated bus may extend physically and/or logically beyond the mud pump control portion of the drill machine so that CPLD of other portions (e.g., the crown block and the like) may coordinate data collection and related activity through portions of the drilling machine.

In embodiments, a system for data collection in an industrial environment comprising distributed programmable logic devices connected by a dedicated control bus may be deployed with compressors in an oil and gas harvesting environment, such as an oil and/or gas field. Compressors are used in the oil and gas industry for compressing a variety of gases and purposes include flash gas, gas lift, reinjection, boosting, vapor-recovery, casing head and the like. Collecting data from sensors for these different compressor functions may require substantively different control regimes. Distributing CPLDs programmed with different control regimes is an approach that may accommodate these diverse data collection requirements. One or more CPLDs may be disposed with sets of sensors for the different compressor functions. A dedicated control bus may be used to facilitate coordination of control and/or programming of CPLDs in and across compressor instances. In an example, a CPLD may be configured to manage a data collection infrastructure for sensors disposed to collect compressor-related conditions for flash gas compression; a second CPLD or group of CPLDs may be configured to manage a data collection infrastructure for sensors disposed to collect compressor related conditions for vapor-recovery gas compression. These groups of CPLDs may operate control programs.

In embodiments, a system for data collection in an industrial environment comprising distributed programmable logic devices connected by a dedicated control bus may be deployed in a refinery with turbines for oil and gas production, such as with modular impulse steam turbines. A system for collection of data from impulse steam turbines may be configured with a plurality of condition sensing and collection modules adapted for specific functions of an impulse steam turbine. Distributing CPLDs along with these modules can facilitate adaptable data collection to suit individual installations. As an example, blade conditions, such as tip rotational rate, temperature rise of the blades, impulse pressure, blade acceleration rate, and the like may be captured in data collection modules configured with sensors for sensing these conditions. Other modules may be configured to collect data associated with valves (e.g., in a multi-valve configuration, one or more modules may be configured for each valve or for a set of valves), turbine exhaust (e.g., radial exhaust data collection may be configured differently than axial exhaust data collection), turbine speed sensing may be configured differently for fixed versus variable speed implementations, and the like. Additionally, impulse gas turbine systems may be installed with other systems, such as combined cycle systems, cogeneration systems, solar power generation systems, wind power generation systems, hydropower generation systems, and the like. Data collection requirements for these installations may also vary. Using a CPLD-based, modular data collection system that uses a dedicated interconnection bus for the CPLDs may facilitate programming and/or reprogramming of each module directly in place without having to shut down or physically access each module.

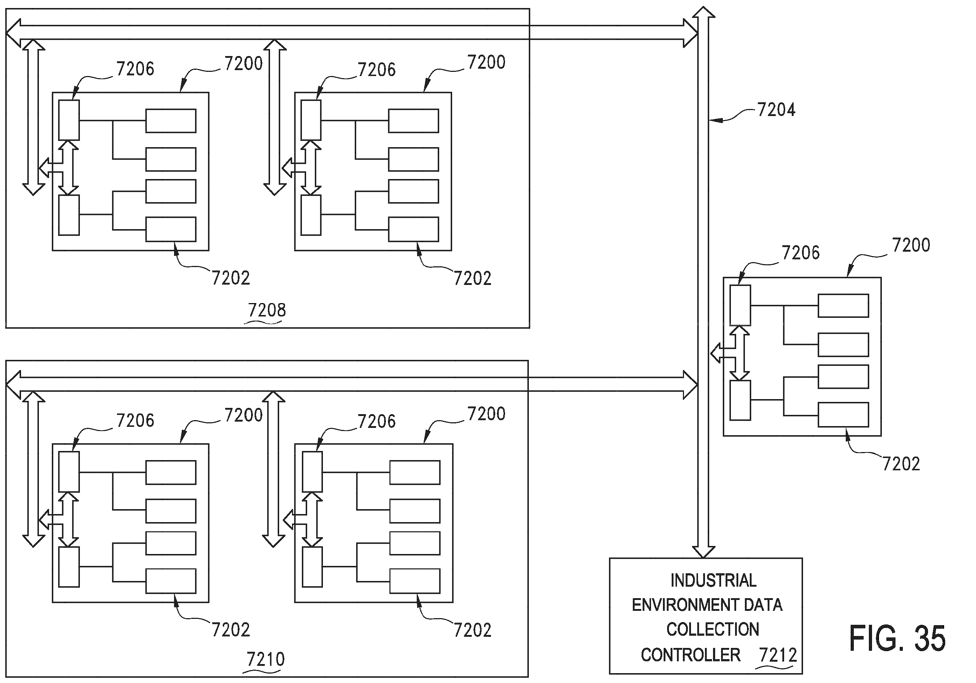

Referring to Figure 35, an exemplary embodiment of a system for data collection in an industrial environment comprising distributed CPLDs interconnected by a bus for control and/or programming thereof is depicted. An exemplary data collection module 7200 may comprise one or more CPLDs 7206 for controlling one or more data collection system resources, such as sensors 7202 and the like. Other data collection resources that a CPLD may control may include crosspoint switches, multiplexers, data converters, and the like. CPLDs on a module may be interconnected by a bus, such as a dedicated logic bus 7204 that may extend beyond a data collection module to CPLDs on other data collection modules. Data collection modules, such as module 7200 may be configured in the environment, such as on an industrial machine 7208 (e.g., an impulse gas turbine) and/or 7210 (e.g., a co-generation system), and the like. Control and/or configuration of the CPLDs may be handled by a controller 7212 in the environment. Data collection and routing resources and interconnection (not shown) may also be configured within and among data collection modules 7200 as well as between and among industrial machines 7208 and 7210, and/or with external systems, such as Internet portals, data analysis servers, and the like to facilitate data collection, routing, storage, analysis, and the like.

An example system for data collection in an industrial environment includes a number of industrial condition sensing and acquisition modules, with a programmable logic component disposed on each of the modules, where the programmable logic component controls a portion of the sensing and acquisition functional of the corresponding module. The system includes communication bus that is dedicated to interconnecting the at least one programmable logic component disposed on at least one of the plurality of modules, wherein the communication bus extends to other programmable logic components on other sensing and acquisition modules.

In certain further embodiments, a system includes the programmable logic component programmed via the communication bus, the communication bus including a portion dedicated to programming of the programmable logic components, controlling a portion of the sensing and acquisition functionality of a module by a power control function such as: controlling power of a sensor, a multiplexer, a portion of the module, and/or controlling a sleep mode of the programmable logic component; controlling a portion of the sensing and acquisition functionality of a module by providing a voltage reference to a sensor and/or an analog-to-digital converter disposed on the module, by detecting a relative the phase of at least two analog signals derived from at least two sensors disposed on the module; by controlling sampling of data provided by at least one sensor disposed on the module; by detecting a peak voltage of a signal provided by a sensor disposed on the module; and/or by configuring at least one multiplexer disposed on the module by specifying to the multiplexer a mapping of at least one input and one output. In certain embodiments, the communication bus extends to other programmable logic components on other condition sensing and/or acquisition modules. In certain embodiments, a module may be an industrial environment condition sensing module. In certain embodiments, a module control program includes an algorithm for implementing an intelligent sensor interface communication protocol, such as an IEEE1451.2 compatible intelligent sensor interface communication protocol. In certain embodiments, a programmable logic component includes configuring the programmable logic component and/or the sensing or acquisition module to implement a smart band data collection template. Example and non-limiting programmable logic components include field programmable gate arrays, complex programmable logic devices, and/or microcontrollers.

An example system includes a drilling machine for oil and gas field use, with a condition sensing and/or acquisition module to monitor aspects of a drilling machine. Without limitation, a further example system includes monitoring a compressor and/or monitoring an impulse steam engine.

In embodiments, a system for data collection in an industrial environment may include a trigger signal and at least one data signal that share a common output of a signal multiplexer and upon detection of a condition in the industrial environment, such as a state of the trigger signal, the common output is switched to propagate either the data signal or the trigger signal. Sharing an output between a data signal and a trigger signal may also facilitate reducing a number of individually routed signals in an industrial environment. Benefits of reducing individually routed signals may include reducing the number of interconnections between data collection module, thereby reducing the complexity of the industrial environment. Trade-offs for reducing individually routed signals may include increasing sophistication of logic at signal switching modules to implement the detection and conditional switching of signals. A net benefit of this added localized logic complexity may be an overall reduction in the implementation complexity of such a data collection system in an industrial environment.

Exemplary deployment environments may include environments with trigger signal channel limitations, such as existing data collection systems that do not have separate trigger support for transporting an additional trigger signal to a module with sufficient computing sophistication to perform trigger detection. Another exemplary deployment may include systems that require at least some autonomous control for performing data collection.

In embodiments, a system for data collection in an industrial environment may include an analog switch that switches between a first input, such as a trigger input and a second input, such as a data input based on a condition of the first input. A trigger input may be monitored by a portion of the analog switch to detect a change in the signal, such as from a lower voltage to a higher voltage relative to a reference or trigger threshold voltage. In embodiments, a device that may receive the switched signal from the analog switch may monitor the trigger signal for a condition that indicates a condition for switching from the trigger input to the data input. When a condition of the trigger input is detected, the analog switch may be reconfigured, to direct the data input to the same output that was propagating the trigger output.

In embodiments, a system for data collection in an industrial environment may include an analog switch that directs a first input to an output of the analog switch until such time as the output of the analog switch indicates that a second input should be directed to the output of the analog switch. The output of the analog switch may propagate a trigger signal to the output. In response to the trigger signal propagating through the switch transitioning from a first condition (e.g., a first voltage below a trigger threshold voltage value) to a second condition (e.g., a second voltage above the trigger threshold voltage value), the switch may stop propagating the trigger signal and instead propagate another input signal to the output. In embodiments, the trigger signal and the other data signal may be related, such as the trigger signal may indicate a presence of an object being placed on a conveyer and the data signal represents a strain placed on the conveyer.

In embodiments, to facilitate timely detection of the trigger condition, a rate of sampling of the output of the analog switch may be adjustable, so that, for example, the rate of sampling is higher while the trigger signal is propagated and lower when the data signal is propagated. Alternatively, a rate of sampling may be fixed for either the trigger or the data signal. In embodiments, the rate of sampling may be based on a predefined time from trigger occurrence to trigger detection and may be faster than a minimum sample rate to capture the data signal.

In embodiments, routing a plurality of hierarchically organized triggers onto another analog channel may facilitate implementing a hierarchical data collection triggering structure in an industrial environment. A data collection template to implement a hierarchical trigger signal architecture may include signal switch configuration and function data that may facilitate a signal switch facility, such as an analog crosspoint switch or multiplexer to output a first input trigger in a hierarchy, and based on the first trigger condition being detected, output a second input trigger in the hierarchy on the same output as the first input trigger by changing an internal mapping of inputs to outputs. Upon detection of the second input trigger condition, the output may be switched to a data signal, such as data from a sensor in an industrial environment.

In embodiments, upon detection of a trigger condition, in addition to switching from the trigger signal to a data signal, an alarm may be generated and optionally propagated to a higher functioning device/module. In addition to switching to a data signal, upon detection of a state of the trigger, sensors that otherwise may be disabled or powered down may be energized/activated to begin to produce data for the newly selected data signal. Activating might alternatively include sending a reset or refresh signal to the sensor(s).

In embodiments, a system for data collection in an industrial environment may include a system for routing a trigger signal onto a data signal path in association with a gearbox of an industrial vehicle. Combining a trigger signal onto a signal path that is also used for a data signal may be useful in gearbox applications by reducing the number of signal lines that need to be routed, while enabling advanced functions, such as data collection based on pressure changes in the hydraulic fluid and the like. As an example, a sensor may be configured to detect a pressure difference in the hydraulic fluid that exceeds a certain threshold as may occur when the hydraulic fluid flow is directed back into the impeller to give higher torque at low speeds. The output of such a sensor may be configured as a trigger for collecting data about the gearbox when operating at low speeds. In an example, a data collection system for an industrial environment may have a multiplexer or switch that facilitates routing either a trigger or a data channel over a single signal path. Detecting the trigger signal from the pressure sensor may result in a different signal being routed through the same line that the trigger signal was routed by switching a set of controls. A multiplexer may, for example, output the trigger signal until the trigger signal is detected as indicating that the output should be changed to the data signal. As a result of detecting the high-pressure condition, a data collection activity may be activated so that data can be collected using the same line that was recently used by the trigger signal.

In embodiments, a system for data collection in an industrial environment may include a system for routing a trigger signal onto a data signal path in association with a vehicle suspension for truck and car operation. Vehicle suspension, particularly active suspension may include sensors for detecting road events, suspension conditions, and vehicle data, such as speed, steering, and the like. These conditions may not always need to be detected, except, for example, upon detection of a trigger condition. Therefore, combining the trigger condition signal and at least one data signal on a single physical signal routing path could be implemented. Doing so may reduce costs due to fewer physical connections required in such a data collection system. In an example, a sensor may be configured to detect a condition, such as a pot hole, to which the suspension must react. Data from the suspension may be routed along the same signal routing path as this road condition trigger signal so that upon detection of the pot hole, data may be collected that may facilitate determining aspects of the suspension's reaction to the pot hole.

In embodiments, a system for data collection in an industrial environment may include a system for routing a trigger signal onto a data signal path in association with a turbine for power generation in a power station. A turbine used for power generation may be retrofitted with a data collection system that optimizes existing data signal lines to implement greater data collection functions. One such approach involves routing new sources of data over existing lines. While multiplexing signals generally satisfies this need, combining a trigger signal with a data signal via a multiplexer or the like can further improve data collection. In an example, a first sensor may include a thermal threshold sensor that may measure the temperature of an aspect of a power generation turbine. Upon detection of that trigger (e.g., by the temperature rising above the thermal threshold), a data collection system controller may send a different data collection signal over the same line that was used to detect the trigger condition. This may be accomplished by a controller or the like sensing the trigger signal change condition and then signaling to the multiplexer to switch from the trigger signal to a data signal to be output on the same line as the trigger signal for data collection. In this example, when a turbine is detected as having a portion that exceeds its safe thermal threshold, a secondary safety signal may be routed over the trigger signal path and monitored for additional safety conditions, such as overheating and the like.

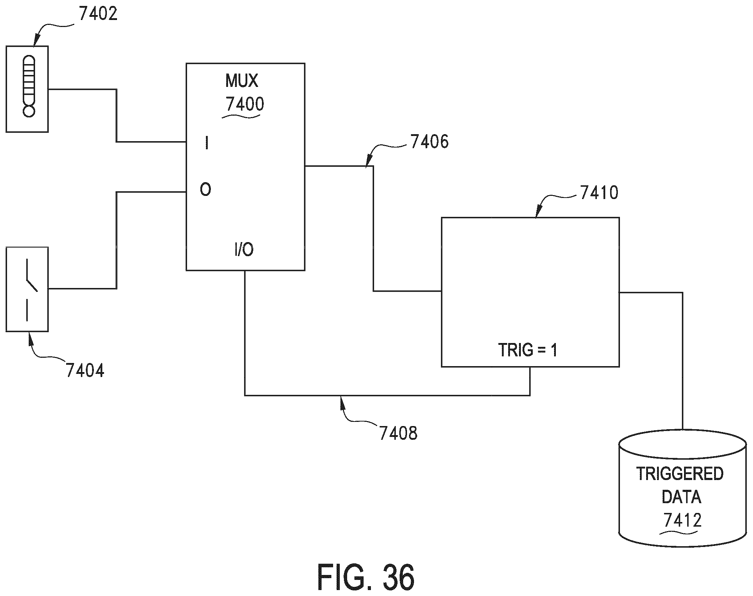

Referring to Figure 36, an embodiment of routing a trigger signal over a data signal path in a data collection system in an industrial environment is depicted. Signal multiplexer 7400 may receive a trigger signal on a first input from a sensor or other trigger source 7404 and a data signal on a second input from a sensor for detecting a temperature associated with an industrial machine in the environment 7402. The multiplexer 7400 may be configured to output the trigger signal onto an output signal path 7406. A data collection module 7410 may process the signal on the data path 7406 looking for a change in the signal indicative of a trigger condition provided from the trigger sensor 7404 through the multiplexer 7400. Upon detection, a control output 7408 may be changed and thereby control the multiplexer 7400 to start outputting data from the temperature probe 7402 by switching an internal switch or the like that may control one or more of the inputs that may be routed to the output 7406. Data collection facility 7410 may activate a data collection template in response to the detected trigger that may include switching the multiplexer and collecting data into triggered data storage 7412. Upon completion of the data collection activity, multiplexer control signal 7408 may revert to its initial condition so that trigger sensor 7404 may be monitored again.

An example system for data collection in an industrial environment includes an analog switch that directs a first input to an output of the analog switch until such time as the output of the analog switch indicates that a second input should be directed to the output of the analog switch. In certain further embodiments, the example system includes: where the output of the analog switch indicated that the second input should be directed to the output based on the output transitioning from a pending condition to a triggered condition; wherein the triggered condition includes detecting the output presenting a voltage above a trigger voltage value; routing a number of signals with the analog switch from inputs on the analog switch to outputs on the analog switch in response to the output of the analog switch indicating that the second input should be directed to the output; sampling the output of the analog switch at a rate that exceeds a rate of transition for a number of signals input to the analog switch; and/or generating an alarm signal when the output of the analog switch indicates that a second input should be directed to the output of the analog switch.

An example system for data collection in an industrial environment includes an analog switch that switches between a first input and a second input based on a condition of the first input. In certain further embodiments, the condition of the first input comprises the first input presenting a triggered condition, and/or the triggered condition includes detecting the first input presenting a voltage above a trigger voltage value. In certain embodiments, the analog switch includes routing a plurality of signals with the analog from inputs on the analog switch to outputs on the analog switch based on the condition of the first input, sampling an input of the analog switch at a rate that exceeds a rate of transition for a plurality of signals input to the analog switch, and/or generating an alarm signal based on the condition of the first input.

An example system for data collection in an industrial environment includes a trigger signal and at least one data signal that share a common output of a signal multiplexer, and upon detection of a predefined state of the trigger signal, the common output is configured to propagate the at least one data signal through the signal multiplexer. In certain further embodiments, the signal multiplexer is an analog multiplexer, the predefined state of the trigger signal is detected on the common output, detection of the predefined state of the trigger signal includes detecting the common output presenting a voltage above a trigger voltage value, the multiplexer includes routing a plurality of signals with the multiplexer from inputs on the multiplexer to outputs on the multiplexer in response to detection of the predefined state of the trigger signal, the multiplexer includes sampling the output of the multiplexer at a rate that exceeds a rate of transition for a plurality of signals input to the multiplexer, the multiplexer includes generating an alarm in response to detection of the predefined state of the trigger signal, and/or the multiplexer includes activating at least one sensor to produce the at least one data signal. Without limitation, example systems include: monitoring a gearbox of an industrial vehicle by directing a trigger signal representing a condition of the gearbox to an output of the analog switch until such time as the output of the analog switch indicates that a second input representing a condition of the gearbox related to the trigger signal should be directed to the output of the analog switch; monitoring a suspension system of an industrial vehicle by directing a trigger signal representing a condition of the suspension to an output of the analog switch until such time as the output of the analog switch indicates that a second input representing a condition of the suspension related to the trigger signal should be directed to the output of the analog switch; and/or monitoring a power generation turbine by directing a trigger signal representing a condition of the power generation turbine to an output of the analog switch until such time as the output of the analog switch indicates that a second input representing a condition of the power generation turbine related to the trigger signal should be directed to the output of the analog switch.

In embodiments, a system for data collection in an industrial environment may include a data collection system that monitors at least one signal for a set of collection band parameters and upon detection of a parameter from the set of collection band parameters in the signal, configures collection of data from a set of sensors based on the detected parameter. The set of selected sensors, the signal, and the set of collection band parameters may be part of a smart bands data collection template that may be used by the system when collecting data in an industrial environment. A motivation for preparing a smart-bands data collection template may include monitoring a set of conditions of an industrial machine to facilitate improved operation, reduce down time, preventive maintenance, failure prevention, and the like. Based on analysis of data about the industrial machine, such as those conditions that may be detected by the set of sensors, an action may be taken, such as notifying a user of a change in the condition, adjusting operating parameters, scheduling preventive maintenance, triggering data collection from additional sets of sensors, and the like. An example of data that may indicate a need for some action may include changes that may be detectable through trends present in the data from the set of sensors. Another example is trends of analysis values derived from the set of sensors.

In embodiments, the set of collection band parameters may include values received from a sensor that is configured to sense a condition of the industrial machine (e.g., bearing vibration). However, a set of collection band parameters may instead be a trend of data received from the sensor (e.g., a trend of bearing vibration across a plurality of vibration measurements by a bearing vibration sensor). In embodiments, a set of collection band parameters may be a composite of data and/or trends of data from a plurality of sensors (e.g., a trend of data from on-axis and off-axis vibration sensors). In embodiments, when a data value derived from one or more sensors as described herein is sufficiently close to a value of data in the set of collection band parameters, the data collection activity from the set of sensors may be triggered. Alternatively, a data collection activity from the set of sensors may be triggered when a data value derived from the one or more sensors (e.g., trends and the like) falls outside of a set of collection band parameters. In an example, a set of data collection band parameters for a motor may be a range of rotational speeds from 95% to 105% of a select operational rotational speed. So long as a trend of rotational speed of the motor stays within this range, a data collection activity may be deferred. However, when the trend reaches or exceeds this range, then a data collection activity, such as one defined by a smart bands data collection template may be triggered.

In embodiments, triggering a data collection activity, such as one defined by a smart bands data collection template, may result in a change to a data collection system for an industrial environment that may impact aspects of the system such as data sensing, switching, routing, storage allocation, storage configuration, and the like. This change to the data collection system may occur in near real time to the detection of the condition; however, it may be scheduled to occur in the future. It may also be coordinated with other data collection activities so that active data collection activities, such as a data collection activity for a different smart bands data collection template, can complete prior to the system being reconfigured to meet the smart bands data collection template that is triggered by the sensed condition meeting the smart bands data collection trigger.

In embodiments, processing of data from sensors may be cumulative over time, over a set of sensors, across machines in an industrial environment, and the like. While a sensed value of a condition may be sufficient to trigger a smart bands data collection template activity, data may need to be collected and processed over time from a plurality of sensors to generate a data value that may be compared to a set of data collection band parameters for conditionally triggering the data collection activity. Using data from multiple sensors and/or processing data, such as to generate a trend of data values and the like may facilitate preventing inconsequential instances of a sensed data value being outside of an acceptable range from causing unwarranted smart bands data collection activity. In an example, if a vibration from a bearing is detected outside of an acceptable range infrequently, then trending for this value over time may be useful to detect if the frequency is increasing, decreasing, or staying substantially constant or within a range of values. If the frequency of such a value is found to be increasing, then such a trend is indicative of changes occurring in operation of the industrial machine as experienced by the bearing. An acceptable range of values of this trended vibration value may be established as a set of data collection band parameters against which vibration data for the bearing will be monitored. When the trended vibration value is outside of this range of acceptable values, a smart bands data collection activity may be activated.

In embodiments, a system for data collection in an industrial environment that supports smart band data collection templates may be configured with data processing capability at a point of sensing of one or more conditions that may trigger a smart bands data collection template data collection activity, such as: by use of an intelligent sensor that may include data processing capabilities; by use of a programmable logic component that interfaces with a sensor and processes data from the sensor; by use of a computer processor, such as a microprocessor and the like disposed proximal to the sensor; and the like. In embodiments, processing of data collected from one or more sensors for detecting a smart bands template data collection activity may be performed by remote processors, servers, and the like that may have access to data from a plurality of sensors, sensor modules, industrial machines, industrial environments, and the like.

In embodiments, a system for data collection in an industrial environment may include a data collection system that monitors an industrial environment for a set of parameters, and upon detection of at least one parameter, configures the collection of data from a set of sensors and causes a data storage controller to adapt a configuration of data storage facilities to support collection of data from the set of sensors based on the detected parameter. The methods and systems described herein for conditionally changing a configuration of a data collection system in an industrial environment to implement a smart bands data collection template may further include changes to data storage architectures. As an example, a data storage facility may be disposed on a data collection module that may include one or more sensors for monitoring conditions in an industrial environment. This local data storage facility may typically be configured for rapid movement of sensed data from the module to a next level sensing or processing module or server. When a smart bands data collection condition is detected, sensor data from a plurality of sensors may need to be captured concurrently. To accommodate this concurrent collection, the local memory may be reconfigured to capture data from each of the plurality of sensors in a coordinated manner, such as repeatedly sampling each of the sensors synchronously, or with a known offset, and the like, to build up a set of sensed data that may be much larger than would typically be captured and moved through the local memory. A storage control facility for controlling the local storage may monitor the movement of sensor data into and out of the local data storage, thereby ensuring safe movement of data from the plurality of sensors to the local data storage and on to a destination, such as a server, networked storage facility, and the like. The local data storage facility may be configured so that data from the set of sensors associated with a smart bands data collection template are securely stored and readily accessible as a set of smart band data to facilitate processing the smart band-specific data. As an example, local storage may comprise non-volatile memory (NVM). To prepare for data collection in response to a smart band data collection template being triggered, portions of the NVM may be erased to prepare the NVM to receive data as indicated in the template.

In embodiments, multiple sensors may be arranged into a set of sensors for condition-specific monitoring. Each set, which may be a logical set of sensors, may be selected to provide information about elements in an industrial environment that may provide insight into potential problems, root causes of problems, and the like. Each set may be associated with a condition that may be monitored for compliance with an acceptable range of values. The set of sensors may be based on a machine architecture, hierarchy of components, or a hierarchy of data that contributes to a finding about a machine that may usefully be applied to maintaining or improving performance in the industrial environment. Smart band sensor sets may be configured based on expert system analysis of complex conditions, such as machine failures and the like. Smart band sensor sets may be arranged to facilitate knowledge gathering independent of a particular failure mode or history. Smart band sensor sets may be arranged to test a suggested smart band data collection template prior to implementing it as part of an industrial machine operations program. Gathering and processing data from sets of sensors may facilitate determining which sensors contribute meaningful data to the set, and those sensors that do not contribute can be removed from the set. Smart band sensor sets may be adjusted based on external data, such as industry studies that indicate the types of sensor data that is most helpful to reduce failures in an industrial environment.

In embodiments, a system for data collection in an industrial environment may include a data collection system that monitors at least one signal for compliance to a set of collection band conditions and upon detection of a lack of compliance, configures the collection of data from a predetermined set of sensors associated with the monitored signal. Upon detection of a lack of compliance, a collection band template associated with the monitored signal may be accessed, and resources identified in the template may be configured to perform the data collection. In embodiments, the template may identify sensors to activate, data from the sensors to collect, duration of collection or quantity of data to be collected, destination (e.g., memory structure) to store the collected data, and the like. In embodiments, a smart band method for data collection in an industrial environment may include periodic collection of data from one or more sensors configured to sense a condition of an industrial machine in the environment. The collected data may be checked against a set of criteria that define an acceptable range of the condition. Upon validation that the collected data is either approaching one end of the acceptable limit or is beyond the acceptable range of the condition, data collection may commence from a smart-band group of sensors associated with the sensed condition based on a smart-band collection protocol configured as a data collection template. In embodiments, an acceptable range of the condition is based on a history of applied analytics of the condition. In embodiments, upon validation of the acceptable range being exceeded, data storage resources of a module in which the sensed condition is detected may be configured to facilitate capturing data from the smart band group of sensors.

In embodiments, monitoring a condition to trigger a smart band data collection template data collection action may be: in response to: a regulation, such as a safety regulation; in response to an upcoming activity, such as a portion of the industrial environment being shut down for preventive maintenance; in response to sensor data missing from routine data collection activities; and the like. In embodiments, in response to a faulty sensor or sensor data missing from a smart band template data collection activity, one or more alternate sensors may be temporarily included in the set of sensors so as to provide data that may effectively substitute for the missing data in data processing algorithms.

In embodiments, smart band data collection templates may be configured for detecting and gathering data for smart band analysis covering vibration spectra, such as vibration envelope and current signature for spectral regions or peaks that may be combinations of absolute frequency or factors of machine related parameters, vibration time waveforms for time-domain derived calculations including, without limitation: RMS overall, peak overall, true peak, crest factor, and the like; vibration vectors, spectral energy humps in various regions (e.g., low-frequency region, high frequency region, low orders, and the like); pressure-volume analysis and the like.

In embodiments, a system for data collection that applies smart band data collection templates may be applied to an industrial environment, such as ball screw actuators in an automated production environment. Smart band analysis may be applied to ball screw actuators in industrial environments such as precision manufacturing or positioning applications (e.g., semiconductor photolithography machines, and the like). As a typical primary objective of using a ball screw is for precise positioning, detection of variation in the positioning mechanism can help avoid costly defective production runs. Smart bands triggering and data collection may help in such applications by detecting, through smart band analysis, potential variations in the positioning mechanism such as in the ball screw mechanism, a worm drive, a linear motor, and the like. In an example, data related to a ball screw positioning system may be collected with a system for data collection in an industrial environment as described herein. A plurality of sensors may be configured to collect data such as screw torque, screw direction, screw speed, screw step, screw home detection, and the like. Some portion of this data may be processed by a smart bands data analysis facility to determine if variances, such as trends in screw speed as a function of torque, approach or exceed an acceptable threshold. Upon such a determination, a data collection template for the ball screw production system may be activated to configure the data sensing, routing, and collection resources of the data collection system to perform data collection to facilitate further analysis. The smart band data collection template facilitates rapid collection of data from other sensors than screw speed and torque, such as position, direction, acceleration, and the like by routing data from corresponding sensors over one or more signal paths to a data collector. The duration and order of collection of the data from these sources may be specified in the smart bands data collection template so that data required for further analysis is effectively captured.

In embodiments, a system for data collection that applies smart band data collection templates to configure and utilize data collection and routing infrastructure may be applied to ventilation systems in mining environments. Ventilation provides a crucial role in mining safety. Early detection of potential problems with ventilation equipment can be aided by applying a smart bands approach to data collection in such an environment. Sensors may be disposed for collecting information about ventilation operation, quality, and performance throughout a mining operation. At each ventilation device, ventilation-related elements, such as fans, motors, belts, filters, temperature gauges, voltage, current, air quality, poison detection, and the like may be configured with a corresponding sensor. While variation in any one element (e.g., air volume per minute, and the like) may not be indicative of a problem, smart band analysis may be applied to detect trends over time that may be suggestive of potential problems with ventilation equipment. To perform smart bands analysis, data from a plurality of sensors may be required to form a basis for analysis. By implementing data collection systems for ventilation stations, data from a ventilation system may be captured. In an example, a smart band analysis may be indicated for a ventilation station. In response to this indication, a data collection system may be configured to collect data by routing data from sensors disposed at the ventilation station to a central monitoring facility that may gather and analyze data from several ventilation stations.

In embodiments, a system for data collection that applies smart band data collection templates to configure and utilize data collection and routing infrastructure may be applied to drivetrain data collection and analysis in mining environments. A drivetrain, such as a drivetrain for a mining vehicle, may include a range of elements that could benefit from use of the methods and systems of data collection in an industrial environment as described herein. In particular, smart band-based data collection may be used to collect data from heavy duty mining vehicle drivetrains under certain conditions that may be detectable by smart bands analysis. A smart bands-based data collection template may be used by a drivetrain data collection and routing system to configure sensors, data paths, and data collection resources to perform data collection under certain circumstances, such as those that may indicate an unacceptable trend of drivetrain performance. A data collection system for an industrial drivetrain may include sensing aspects of a non-steering axle, a planetary steering axle, driveshafts, (e.g., main and wing shafts), transmissions, (e.g., standard, torque converters, long drop), and the like. A range of data related to these operational parts may be collected. However, data for support and structural members that support the drivetrain may also need to be collected for thorough smart band analysis. Therefore, collection across this wide range of drivetrain-related components may be triggered based on a smart band analysis determination of a need for this data. In an example, a smart band analysis may indicate potential slippage between a main and wing driveshaft that may represented by an increasing trend in response delay time of the wing drive shaft to main drive shaft operation. In response to this increasing trend, data collection modules disposed throughout the mining vehicle's drive train may be configured to route data from local sensors to be collected and analyzed by data collectors. Mining vehicle drivetrain smart based data collection may include a range of templates based on which type of trend is detected. If a trend related to a steering axle is detected, a data collection template to be implemented may be different in sensor content, duration, and the like than for a trend related to power demand for a normalized payload. Each template could configure data sensing, routing, and collection resources throughout the vehicle drive train accordingly.

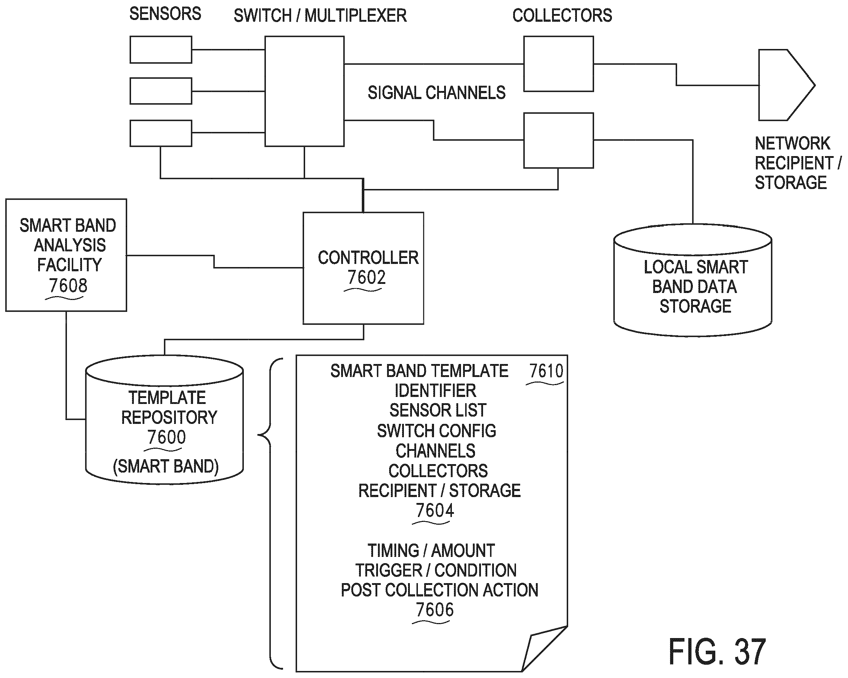

Referring to Figure 37, a system for data collection in an industrial environment that facilitates data collection for smart band analysis is depicted. A system for data collection in an industrial environment may include a smart band analysis data collection template repository 7600 in which smart band templates 7610 for data collection system configuration and collection of data may be stored and accessed by a data collection controller 7602. The templates 7610 may include data collection system configuration 7604 and operation information 7606 that may identify sensors, collectors, signal paths, and information for initiation and coordination of collection, and the like. A controller 7602 may receive an indication, such as a command from a smart band analysis facility 7608 to select and implement a specific smart band template 7610. The controller 7602 may access the template 7610 and configure the data collection system resources based on the information in that template. In embodiments, the template may identify: specific sensors; a multiplexer/switch configuration, data collection trigger/initiation signals and/or conditions, time duration and/or amount of data for collection; destination of collected data; intermediate processing, if any; and any other useful information, (e.g., instance identifier, and the like). The controller 7602 may configure and operate the data collection system to perform the collection for the smart band template and optionally return the system configuration to a previous configuration.

An example system for data collection in an industrial environment includes a data collection system that monitors at least one signal for a set of collection band parameters and, upon detection of a parameter from the set of collection band parameters, configures portions of the system and performs collection of data from a set of sensors based on the detected parameter. In certain further embodiments, the signal includes an output of a sensor that senses a condition in the industrial environment, where the set of collection band parameters comprises values derivable from the signal that are beyond an acceptable range of values derivable from the signal; where the at least one signal includes an output of a sensor that senses a condition in the industrial environment; wherein configuring portions of the system includes configuring a storage facility to accept data collected from the set of sensors; where configuring portions of the system includes configuring a data routing portion includes at least one of: an analog crosspoint switch, a hierarchical multiplexer, an analog-to-digital converter, an intelligent sensor, and/or a programmable logic component; wherein detection of a parameter from the set of collection band parameters comprises detecting a trend value for the signal being beyond an acceptable range of trend values; and/or where configuring portions of the system includes implementing a smart band data collection template associated with the detected parameter. In certain embodiments, a data collection system monitors a signal for data values within a set of acceptable data values that represent acceptable collection band conditions for the signal and, upon detection of a data value for the at least one signal outside of the set of acceptable data values, triggers a data collection activity that causes collecting data from a predetermined set of sensors associated with the monitored signal. In certain further embodiment, a data collection system includes the signal including an output of a sensor that senses a condition in the industrial environment; where the set of acceptable data value includes values derivable from the signal that are within an acceptable range of values derivable from the signal; configuring a storage facility of the system to facilitate collecting data from the predetermined set of sensors in response to the detection of a data value outside of the set of acceptable data values; configuring a data routing portion of the system including an analog crosspoint switch, a hierarchical multiplexer, an analog-to-digital converter, an intelligent sensor, and/or a programmable logic component in response to detecting a data value outside of the set of acceptable data values; where detection of a data value for the signal outside of the set of acceptable data values includes detecting a trend value for the signal being beyond an acceptable range of trend values; and/or where the data collection activity is defined by a smart band data collection template associated with the detected parameter.

An example method for data collection in an industrial environment comprising includes an operation to collect data from sensor(s) configured to sense a condition of an industrial machine in the environment; an operation to check the collected data against a set of criteria that define an acceptable range of the condition; and in response to the collected data violating the acceptable range of the condition, an operation to collect data from a smart-band group of sensors associated with the sensed condition based on a smart-band collection protocol configured as a smart band data collection template. In certain further embodiments, a method includes where violating the acceptable range of the condition includes a trend of the data from the sensor(s) approaching a maximum value of the acceptable range; where the smart-band group of sensors is defined by the smart band data collection template; where the smart band data collection template includes a list of sensors to activate, data from the sensors to collect, duration of collection of data from the sensors, and/or a destination location for storing the collected data; where collecting data from a smart-band group of sensors includes configuring at least one data routing resource of the industrial environment that facilitates routing data from the smart band group of sensors to a plurality of data collectors; and/or where the set of criteria includes a range of trend values derived by processing the data from sensor(s).

Without limitation, an example system monitors a ball screw actuator in an automated production environment, and monitors at least one signal from the ball screw actuator for a set of collection band parameters and, upon detection of a parameter from the set of collection band parameters, configures portions of the system and performs collection of data from a set of sensors disposed to monitor conditions of the ball screw actuator based on the detected parameter; another example system monitors a ventilation system in a mining environment, and monitors at least one signal from the ventilation system for a set of collection band parameters and, upon detection of a parameter from the set of collection band parameters, configures portions of the system and performs collection of data from a set of sensors disposed to monitor conditions of the ventilation system based on the detected parameter; an example system monitors a drivetrain of a mining vehicle, and monitors at least one signal from the drive train for a set of collection band parameters and, upon detection of a parameter from the set of collection band parameters, configures portions of the system and performs collection of data from a set of sensors disposed to monitor conditions of the drivetrain based on the detected parameter.

In embodiments, a system for data collection in an industrial environment may automatically configure local and remote data collection resources and may perform data collection from a plurality of system sensors that are identified as part of a group of sensors that produce data that is required to perform operational deflection shape rendering. In embodiments, the system sensors are distributed throughout structural portions of an industrial machine in the industrial environment. In embodiments, the system sensors sense a range of system conditions including vibration, rotation, balance, friction, and the like. In embodiments, automatically configuring is in response to a condition in the environment being detected outside of an acceptable range of condition values. In embodiments, a sensor in the identified group of system sensors senses the condition.

In embodiments, a system for data collection in an industrial environment may configure a data collection plan, such as a template, to collect data from a plurality of system sensors distributed throughout a machine to facilitate automatically producing an operational deflection shape visualization ("ODSV") based on machine structural information and a data set used to produce an ODSV of the machine.

In embodiments, a system for data collection in an industrial environment may configure a data collection template for collecting data in an industrial environment by identifying sensors disposed for sensing conditions of preselected structural members of an industrial machine in the environment based on an ODSV of the industrial machine. In embodiments, the template may include an order and timing of data collection from the identified sensors.

In embodiments, methods and systems for data collection in an industrial environment may include a method of establishing an acceptable range of sensor values for a plurality of industrial machine condition sensors by validating an operational deflection shape visualization of structural elements of the machine as exhibiting deflection within an acceptable range, wherein data from the plurality of sensors used in the validated ODSV define the acceptable range of sensor values.

In embodiments, a system for data collection in an industrial environment may include a plurality of data sources, such as sensors, that may be grouped for coordinated data collection to provide data required to produce an ODSV. Information regarding the sensors to group, data collection coordination requirements, and the like may be retrieved from an ODSV data collection template. Coordinated data collection may include concurrent data collection. To facilitate concurrent data collection from a portion of the group of sensors, sensor routing resources of the system for data collection may be configured, such as by configuring a data multiplexer to route data from the portion of the group of sensors to which it connects to data collectors. In embodiments, each such source that connects an input of the multiplexer may be routed within the multiplexer to separate outputs so that data from all of the connected sources may be routed on to data collection elements of the industrial environment. In embodiments, the multiplexer may include data storage capabilities that may facilitate sharing a common output for at least a portion of the inputs. In embodiments, a multiplexer may include data storage capabilities and data bus-enabled outputs so that data for each source may be captured in a memory and transmitted over a data bus, such as a data bus that is common to the outputs of the multiplexer. In embodiments, sensors may be smart sensors that may include data storage capabilities and may send data from the data storage to the multiplexer in a coordinated manner that supports use of a common output of the multiplexer and/or use of a common data bus.

In embodiments, a system for data collection in an industrial environment may comprise templates for configuring the data collection system to collect data from a plurality of sensors to perform ODSV for a plurality of deflection shapes. Individual templates may be configured for visualization of looseness, soft joints, bending, twisting, and the like. Individual deflection shape data collection templates may be configured for different portions of a machine in an industrial environment.

In embodiments, a system for data collection in an industrial environment may facilitate operational deflection shape visualization that may include visualization of locations of sensors that contributed data to the visualization. In the visualization, each sensor that contributed data to generate the visualization may be indicated by a visual element. The visual element may facilitate user access to information about the sensor, such as location, type, representative data contributed, path of data from the sensor to a data collector, a deflection shape template identifier, a configuration of a switch or multiplexer through which the data is routed, and the like. The visual element may be determined by associating sensor identification information received from a sensor with information, such as a sensor map, that correlates sensor identification information with physical location in the environment. The information may appear in the visualization in response to the visual element representing the sensor being selected, such as by a user positioning a cursor on the sensor visual element.

In embodiments, ODSV may benefit from data satisfying a phase relationship requirement. A data collection system in the environment may be configured to facilitate collecting data that complies with the phase relationship requirement. Alternatively, the data collection system may be configured to collect data from a plurality of sensors that contains data that satisfies the phase relationship requirements but may also include data that does not. A post processing operation that may access phase detection data may select a subset of the collected data.

In embodiments, a system for data collection in an industrial environment may include a multiplexer receiving data from a plurality of sensors and multiplexing the received data for delivery to a data collector. The data collector may process the data to facilitate ODSV. ODSV may require data from several different sensors, and may benefit from using a reference signal, such as data from a sensor, when processing data from the different sensors. The multiplexer may be configured to provide data from the different sensors, such as by switching among its inputs over time so that data from each sensor may be received by the data collector. However, the multiplexer may include a plurality of outputs so that at least a portion of the inputs may be routed to least two of the plurality of outputs. Therefore, in embodiments, a multiple output multiplexer may be configured to facilitate data collection that may be suitable for ODSV by routing a reference signal from one of its inputs (e.g., data from an accelerometer) to one of its outputs and multiplexing data from a plurality of its outputs onto one or more of its outputs while maintaining the reference signal output routing. A data collector may collect the data from the reference output and use that to align the multiplexed data from the other sensors.

In embodiments, a system for data collection in an industrial environment may facilitate ODSV through coordinated data collection related to conveyors for mining applications. Mining operations may rely on conveyor systems to move material, supplies, and equipment into and out of a mine. Mining operations may typically operate around the clock; therefore, conveyor downtime may have a substantive impact on productivity and costs. Advanced analysis of conveyor and related systems that focuses on secondary affects that may be challenging to detect merely through point observation may be more readily detected via ODSV. Capturing operational data related to vibration, stresses, and the like can facilitate ODSV. However, coordination of data capture provides more reliable results. Therefore, a data collection system that may have sensors dispersed throughout a conveyor system can be configured to facilitate such coordinated data collection. In an example, capture of data affecting structural components of a conveyor, such as; landing points and the horizontal members that connect them and support the conveyer between landing points; conveyer segment handoff points; motor mounts; mounts of conveyer rollers and the like may need to be coordinated with data related to conveyor dynamic loading, drive systems, motors, gates, and the like. A system for data collection in an industrial environment, such as a mining environment may include data sensing and collection modules placed throughout the conveyor at locations such as segment handoff points, drive systems, and the like. Each module may be configured by one or more controllers, such as programmable logic controllers, that may be connected through a physical or logical (e.g., wireless) communication bus that aids in performing coordinated data collection. To facilitate coordination, a reference signal, such as a trigger and the like, may be communicated among the modules for use when collecting data. In embodiments, data collection and storage may be performed at each module so as to reduce the need for real-time transfer of sensed data throughout the mining environment. Transfer of data from the modules to an ODSV processing facility may be performed after collection, or as communication bandwidth between the modules and the processing facility allows. ODSV can provide insight into conditions in the conveyer, such as deflection of structural members that may, over time cause premature failure. Coordinated data collection with a data collection system for use in an industrial environment, such as mining, can enable ODSV that may reduce operating costs by reducing downtime due to unexpected component failure.

In embodiments, a system for data collection in an industrial environment may facilitate operational deflection shape visualization through coordinated data collection related to fans for mining applications. Fans provide a crucial function in mining operations of moving air throughout a mine to provide ventilation, equipment cooling, combustion exhaust evacuation, and the like. Ensuring reliable and often continuous operation of fans may be critical for miner safety and cost-effective operations. Dozens or hundreds of fans may be used in large mining operations. Fans, such as fans for ventilation management may include circuit, booster, and auxiliary types. High capacity auxiliary fans may operate at high speeds, over 2500 RPMs. Performing ODSV may reveal important reliability information about fans deployed in a mining environment. Collecting the range of data needed for ODSV of mining fans may be performed by a system for collecting data in industrial environments as described herein. In embodiments, sensing elements, such as intelligent sensing and data collection modules may be deployed with fans and/or fan subsystems. These modules may exchange collection control information (e.g., over a dedicated control bus and the like) so that data collection may be coordinated in time and phase to facilitate ODSV.

A large auxiliary fan for use in mining may be constructed for transportability into and through the mine and therefore may include a fan body, intake and outlet ports, dilution valves, protection cage, electrical enclosure, wheels, access panels, and other structural and/or operational elements. The ODSV of such an auxiliary fan may require collection of data from many different elements. A system for data collection may be configured to sense and collect data that may be combined with structural engineering data to facilitate ODSV for this type of industrial fan.

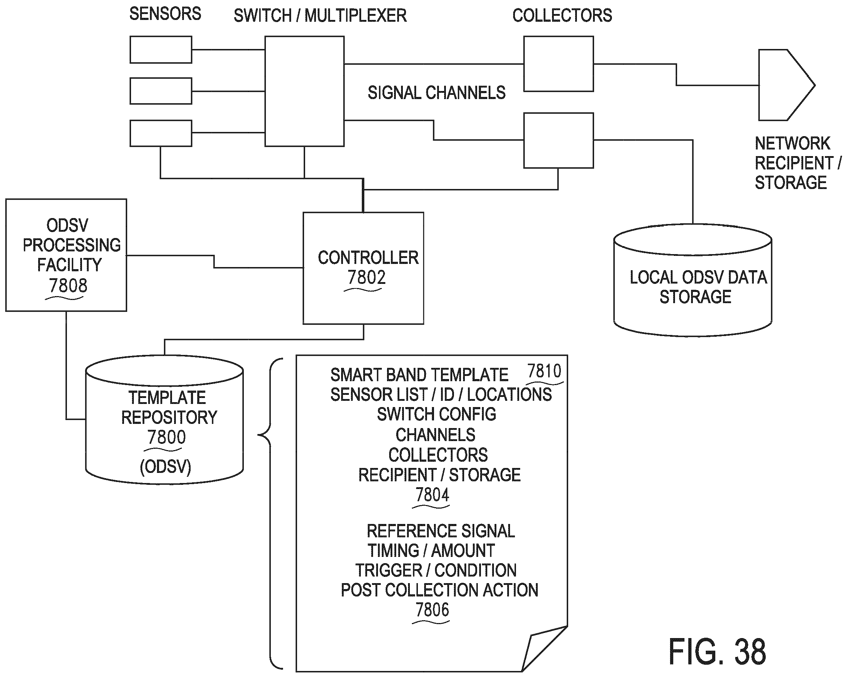

Referring to Figure 38, an embodiment of a system for data collection in an industrial environment that performs coordinated data collection suitable for ODSV is depicted. A system for data collection in an industrial environment may include a ODSV data collection template repository 7800 in which ODSV templates 7810 for data collection system configuration and collection of data may be stored and accessed by a system for data collection controller 7802. The templates 7810 may include data collection system configuration 7804 and operation information 7806 that may identify sensors, collectors, signal paths, reference signal information, information for initiation and coordination of collection, and the like. A controller 7802 may receive an indication, such as a command from a ODSV analysis facility 7808 to select and implement a specific ODSV template 7810. The controller 7802 may access the template 7810 and configure the data collection system resources based on the information in that template. In embodiments, the template may identify specific sensors, multiplexer/switch configuration, reference signals for coordinating data collection, data collection trigger/initiation signals and/or conditions, time duration, and/or amount of data for collection, destination of collected data, intermediate processing, if any, and any other useful information (e.g., instance identifier, and the like). The controller 7802 may configure and operate the data collection system to perform the collection for the ODSV template and optionally return the system configuration to a previous configuration.

An example method of data collection for performing ODSV in an industrial environment includes automatically configuring local and remote data collection resources and collecting data from a number of sensors using the configured resources, where the number of sensors include a group of sensors that produce data that is required to perform the ODSV. In certain further embodiments, an example method further includes where the sensors are distributed throughout structural portions of an industrial machine in the industrial environment; where the sensors sense a range of system conditions including vibration, rotation, balance, and/or friction; where the automatically configuring is in response to a condition in the environment being detected outside of an acceptable range of condition values; where the condition is sensed by a sensor in a group of system sensors; where automatically configuring includes configuring a signal switching resource to concurrently connect a portion of the group of sensors to data collection resources; and/or where the signal switching resource is configured to maintain a connection between a reference sensor and the data collection resources throughout a period of collecting data from the sensors to perform ODSV.

An example method of data collection in an industrial environment includes configuring a data collection plan to collect data from a number of system sensors distributed throughout a machine in the industrial environment, the plan based on machine structural information and an indication of data needed to produce an ODSV of the machine; configuring data sensing, routing and collection resources in the environment based on the data collection plan; and collecting data based on the data collection plan. In certain further embodiments, an example method further includes: producing the ODSV; where the configuring data sensing, routing, and collection resources is in response to a condition in the environment being detected outside of an acceptable range of condition values; where the condition is sensed by a sensor identified in the data collection plan; where configuring resources includes configuring a signal switching resource to concurrently connect the plurality of system sensors to data collection resources; and/or where the signal switching resource is configured to maintain a connection between a reference sensor and the data collection resources throughout a period of collecting data from the sensors to perform ODSV.

An example system for data collection in an industrial environment includes: a number of sensors disposed throughout the environment; multiplexer that connects signals from the plurality of sensors to data collection resources; and a processor for processing data collected from the number of sensors in response to the data collection template, where the processing results in an ODSV of a portion of a machine disposed in the environment. In certain further embodiments, an example system includes: where the ODSV collection template further identifies a condition in the environment on which performing data collection from the identified sensors is dependent; where the condition is sensed by a sensor identified in the ODSV data collection template; where the data collection template specified inputs of the multiplexer to concurrently connect to data collection resources; where the multiplexer is configured to maintain a connection between a reference sensor and the data collection resources throughout a period of collecting data from the sensors to perform ODSV; where the ODSV data collection template specifies data collection requirements for performing ODSV for looseness, soft joints, bending, and/or twisting of a portion of a machine in the industrial environment; and/or where the ODSV collection template specifies an order and timing of data collection from a plurality of identified sensors.

An example method of monitoring a mining conveyer for performing ODSV of the conveyer includes automatically configuring local and remote data collection resources and collecting data from a number of sensors disposed to sense the mining conveyor using the configured resources, wherein the plurality of sensors comprise a group of sensors that produce data that is required to perform the operational deflection shape visualization of a portion of the conveyer. An example method of monitoring a mining fan for performing ODSV of the fan includes automatically configuring local and remote data collection resources collecting data from a number of sensors disposed to sense the fan using the configured resources, and where the number of sensors include a group of sensors that produce data that is sufficient or required to perform ODSV of a portion of the fan.

In embodiments, a system for data collection in an industrial environment may include a hierarchical multiplexer that facilitates successive multiplexing of input data channels according to a configurable hierarchy, such as a user configurable hierarchy. The system for data collection in an industrial environment may include the hierarchical multiplexer that facilitates successive multiplexing of a plurality of input data channels according to a configurable hierarchy. The hierarchy may be automatically configured by a controller based on an operational parameter in the industrial environment, such as a parameter of a machine in the industrial environment.

In embodiments, a system for data collection in an industrial environment may include a plurality of sensors that may output data at different rates. The system may also include a multiplexer module that receives sensor outputs from a first portion of the plurality of sensors with similar output rates into separate inputs of a first hierarchical multiplexer of the multiplexer module. The first hierarchical multiplexer of the multiplexer module may provide at least one multiplexed output of a portion of its inputs to a second hierarchical multiplexer that receives sensor outputs from a second portion of the plurality of sensors with similar output rates and that provides at least one multiplexed output of a portion of its inputs. In embodiments, the output rates of the first set of sensors may be slower than the output rates of the second set of sensors. In embodiments, data collection rate requirements of the first set of sensors may be lower than the data collection rate requirements of the second set of sensors. In embodiments, the first hierarchical multiplexer output is a time-multiplexed combination of a portion of its inputs. In embodiments, the second hierarchical multiplexer receives sensor signals with output rates that are similar to a rate of output of the first multiplexer, wherein the first multiplexer produces time-based multiplexing of the portion of its plurality of inputs.

In embodiments, a system for data collection in an industrial environment may include a hierarchical multiplexer that is dynamically configured based on a data acquisition template. The hierarchical multiplexer may include a plurality of inputs and a plurality of outputs, wherein any input can be directed to any output in response to sensor output collection requirements of the template, and wherein a subset of the inputs can be multiplexed at a first switching rate and output to at least one of the plurality of outputs.

In embodiments, a system for data collection in an industrial environment may include a plurality of sensors for sensing conditions of a machine in the environment, a hierarchical multiplexer, a plurality of analog-to-digital converters (ADCs), a processor, local storage, and an external interface. The system may use the processor to access a data acquisition template of parameters for data collection from a portion of the plurality of sensors, configure the hierarchical multiplexer, the ADCs and the local storage to facilitate data collection based on the defined parameters, and execute the data collection with the configured elements including storing a set of data collected from a portion of the plurality of sensors into the local storage. In embodiments, the ADCs convert analog sensor data into a digital form that is compatible with the hierarchical multiplexer. In embodiments, the processor monitors at least one signal generated by the sensors for a trigger condition and, upon detection of the trigger condition, responds by at least one of communicating an alert over the external interface and performing data acquisition according to a template that corresponds to the trigger condition.

In embodiments, a system for data collection in an industrial environment may include a hierarchical multiplexer that may be configurable based on a data collection template of the environment. The multiplexer may support receiving a large number of data signals (e.g., from sensors in the environment) simultaneously. In embodiments, all sensors for a portion of an industrial machine in the environment may be individually connected to inputs of a first stage of the multiplexer. The first stage of the multiplexer may provide a plurality of outputs that may feed into a second multiplexer stage. The second stage multiplexer may provide multiple outputs that feed into a third stage, and so on. Data collection templates for the environment may be configured for certain data collection sets, such as a set to determine temperature throughout a machine or a set to determine vibration throughout a machine, and the like. Each template may identify a plurality of sensors in the environment from which data is to be collected, such as during a data collection event. When a template is presented to the hierarchical multiplexer, mapping of inputs to outputs for each multiplexing stage may be configured so that the required data is available at output(s) of a final multiplexing hierarchical stage for data collection. In an example, a data collection template to collect a set of data to determine temperature throughout a machine in the environment may identify many temperature sensors. The first stage multiplexer may respond to the template by selecting all of the available inputs that connect to temperature sensors. The data from these sensors maybe multiplexed onto multiple inputs of a second stage sensor that may perform time-based multiplexing to produce a time-multiplexed output(s) of temperature data from a portion of the sensors. These outputs may be gathered by a data collector and de-multiplexed into individual sensor temperature readings.

In embodiments, time-sensitive signals, such as triggers and the like, may connect to inputs that directly connect to a final multiplexer stage, thereby reducing any potential delay caused by routing through multiple multiplexing stages.

In embodiments, a hierarchical multiplexer in a system for data collection in an industrial environment may comprise an array of relays, a programmable logic component, such as a CPLD, a field programmable gate array (FPGA), and the like.

In embodiments, a system for data collection in an industrial environment that may include a hierarchical multiplexer for routing sensor outputs onto signal paths may be used with explosive systems in mining applications. Blast initiating and electronic blasting systems may be configured to provide computer assisted blasting systems. Ensuring that blasting occurs safely may involve effective sensing and analysis of a range of conditions. A system for data collection in an industrial environment may be deployed to sense and collect data associated with explosive systems, such as explosive systems used for mining. A data collection system can use a hierarchical multiplexer to capture data from explosive system installations automatically by aligning, for example, a deployment of the explosive system including its layout plans, integration, interconnectivity, cascading plan, and the like with the hierarchical multiplexer. An explosive system may be deployed with a form of hierarchy that starts with a primary initiator and follows detonation connections through successive layers of electronic blast control to sequenced detonation. Data collected from each of these layers of blast systems configuration may be associated with stages of a hierarchical multiplexer so that data collected from bulk explosive detonation can be captured in a hierarchy that corresponds to its blast control hierarchy.

In embodiments, a system for data collection in an industrial environment that may include a hierarchical multiplexer for routing sensor outputs onto signal paths may be used with refinery blowers in oil and gas pipeline applications. Refinery blower applications include fired heater combustion air preheat systems and the like. Forced draft blowers may include a range of moving and moveable parts that may benefit from condition sensing and monitoring. Sensing may include detecting conditions of: couplings (e.g., temperature, rotational rate, and the like); motors (vibration, temperature, RPMs, torque, power usage, and the like); louver mechanics (actuators, louvers, and the like); and plenums (flow rate, blockage, back pressure, and the like). A system for data collection in an industrial environment that uses a hierarchical multiplexer for routing signals from sensors and the like to data collectors may be configured to collect data from a refinery blower. In an example, a plurality of sensors may be deployed to sense air flow into, throughout, and out of a forced draft blower used in a refinery application, such as to preheat combustion air. Sensors may be grouped based on a frequency of a signal produced by sensors. Sensors that detect louver position and control may produce data at a lower rate than sensors that detect blower RPMs. Therefore, louver position and control sensor signals can be applied to a lower stage in a multiplexer hierarchy than the blower RPM sensors because data from louvers change less often than data from RPM sensors. A data collection system could switch among a plurality of louver sensors and still capture enough information to properly detect louver position. However, properly detecting blower RPM data may require greater bandwidth of connection between the blower RPM sensor and a data collector. A hierarchical multiplexer may enable capturing blower RPM data at a rate that is required for proper detection (perhaps by outputting the RPM sensor data for long durations of time), while switching among several louver sensor inputs and directing them onto (or through) an output that is different than the blower RPM output. Alternatively, the louver inputs may be time-multiplexed with the blower RPM data onto a single output that can be de-multiplexed by a data collector that is configured to determine when blower RPM data is being output and when louver position data is being output.

In embodiments, a system for data collection in an industrial environment that may include a hierarchical multiplexer for routing sensor outputs onto signal paths may be used with pipeline-related compressors (e.g., reciprocating) in oil and gas pipeline applications. A typical use of a reciprocating compressor for pipeline application is production of compressed air for pipeline testing. A system for data collection in an industrial environment may apply a hierarchical multiplexer while collecting data from a pipeline testing-based reciprocating compressor. Data from sensors deployed along a portion of a pipeline being tested may be input to the lowest stage of the hierarchical multiplexer because these sensors may be periodically sampled prior to and during testing. However, the rate of sampling may be low relative to sensors that detect compressor operation, such as parts of the compressor that operate at higher frequencies, such as the reciprocating linkage, motor, and the like. The sensors that provide data at frequencies that enable reproduction of the detected motion may be input to higher stages in the hierarchical multiplexer. Time multiplexing among the pipeline sensors may provide for coverage of a large number of sensors while capturing events such as seal leakage and the like. However, time multiplexing among reciprocating linkage sensors may require output signal bandwidth that may exceed the bandwidth available for routing data from the multiplexer to a data collector. Therefore, in embodiments, a plurality of pipeline sensors may be time-multiplexed onto a single multiplexer output and a compressor sensor detecting rapidly moving parts, such as the compressor motor, may be routed to separate outputs of the multiplexer.

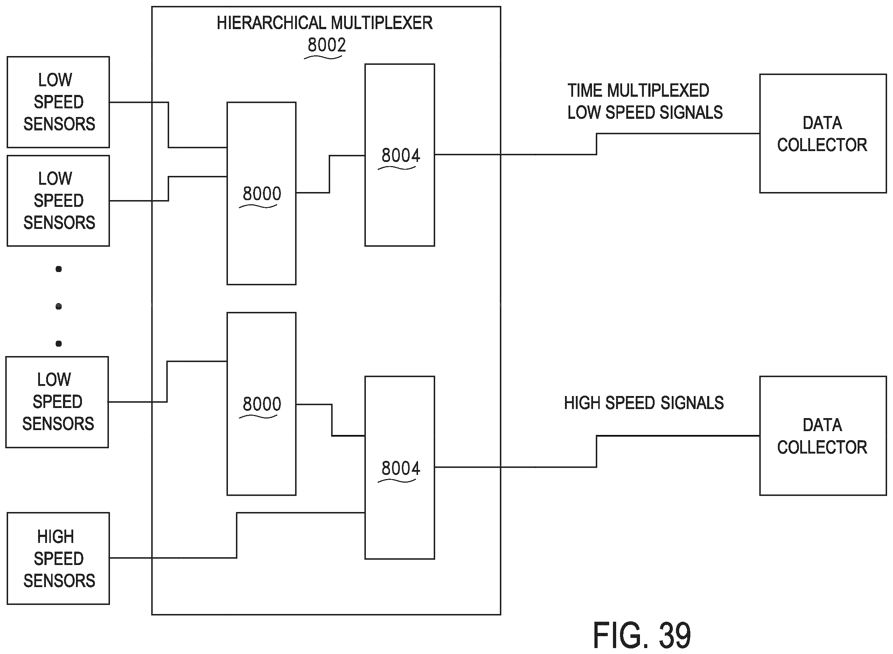

Referring to Figure 39, a system for data collection in an industrial environment that uses a hierarchical multiplexer for routing sensor signals to data collectors is depicted. Outputs from a plurality of sensors, such as sensors that monitor conditions that change with relatively low frequency (e.g., blower louver position sensors) may be input to a lowest hierarchical stage 8000 of a hierarchical multiplexer 8002 and routed to successively higher stages in the multiplexer, ultimately being output from the multiplexer, perhaps as a time-multiplexed signal comprising time-specific samples of each of the plurality of low frequency sensors. Outputs from a second plurality of sensors, such as sensors that monitor motor operation that may run at more than 1000 RPMs may be input to a higher hierarchical stage 8004 of the hierarchical multiplexer and routed to outputs that support the required bandwidth.

An example system for data collection in an industrial environment includes a controller for controlling data collection resources in the industrial environment and a hierarchical multiplexer that facilitates successive multiplexing of a number of input data channels according to a configurable hierarchy, wherein the hierarchy is automatically configured by the controller based on an operational parameter of a machine in the industrial environment. In certain further embodiments, an example system includes: where the operational parameter of the machine is identified in a data collection template; where the hierarchy is automatically configured in response to smart band data collection activation further including an analog-to-digital converter disposed between a source of the input data channels and the hierarchical multiplexer; and/or where the operational parameter of the machine comprises a trigger condition of at least one of the data channels. Another example system for data collection in an industrial environment includes a plurality of sensors and a multiplexer module that receives sensor outputs from a first portion of the sensors with similar output rates into separate inputs of a first hierarchical multiplexer that provides at least one multiplexed output of a portion of its inputs to a second hierarchical multiplexer, the second hierarchical multiplexer receiving sensor outputs from a second portion of the sensors and providing at least one multiplexed output of a portion of its inputs. In certain further embodiments, an example system includes: where the second portion of the sensors output data at rates that are higher than the output rates of the first portion of the sensors; where the first portion and the second portion of the sensors output data at different rates; where the first hierarchical multiplexer output is a time-multiplexed combination of a portion of its inputs; where the second multiplexer receives sensor signals with output rates that are similar to a rate of output of the first multiplexer; and/or where the first multiplexer produces time-based multiplexing of the portion of its inputs.

An example system for data collection in an industrial environment includes a number of sensors for sensing conditions of a machine in the environment a hierarchical multiplexer, a number of analog-to-digital converters, a controller, local storage, an external interface, where the system includes using the controller to access a data acquisition template that defines parameters for data collection from a portion of the sensors, to configure the hierarchical multiplexer, the ADCs, and the local storage to facilitate data collection based on the defined parameters, and to execute the data collection with the configured elements including storing a set of data collected from a portion of the sensors into the local storage. In certain further embodiments, an example system includes: where the ADCs convert analog sensor data into a digital form that is compatible with the hierarchical multiplexer; where the processor monitors at least one signal generated by the sensors for a trigger condition and, upon detection of the trigger condition, responds by communicating an alert over the external interface and/or performing data acquisition according to a template that corresponds to the trigger condition; where the hierarchical multiplexer performs successive multiplexing of data received from the sensors according to a configurable hierarchy; where the hierarchy is automatically configured by the controller based on an operational parameter of a machine in the industrial environment; where the operational parameter of the machine is identified in a data collection template; where the hierarchy is automatically configured in response to smart band data collection activation; the system further including an ADC disposed between a source of the input data channels and the hierarchical multiplexer; where the operational parameter of the machine includes a trigger condition of at least one of the data channels; where the hierarchical multiplexer performs successive multiplexing of data received from the plurality of sensors according to a configurable hierarchy; and/or where the hierarchy is automatically configured by a controller based on a detected parameter of an industrial environment. Without limitation, n example system is configured for monitoring a mining explosive system, and includes a controller for controlling data collection resources associated with the explosive system, and a hierarchical multiplexer that facilitates successive multiplexing of a number of input data channels according to a configurable hierarchy, where the hierarchy is automatically configured by the controller based on a configuration of the explosive system. Without limitation, an example system is configured for monitoring a refinery blower in an oil and gas pipeline applications, and includes a controller for controlling data collection resources associated with the refinery blower, and a hierarchical multiplexer that facilitates successive multiplexing of a number of input data channels according to a configurable hierarchy, where the hierarchy is automatically configured by the controller based on a configuration of the refinery blower. Without limitation, an example system is configured for monitoring a reciprocating compressor in an oil and gas pipeline applications comprising, and includes controller for controlling data collection resources associated with the reciprocating compressor, and a hierarchical multiplexer that facilitates successive multiplexing of a number of input data channels according to a configurable hierarchy, where the hierarchy is automatically configured by the controller based on a configuration of the reciprocating compressor.

In embodiments, a system for data collection in an industrial environment may include an ultrasonic sensor disposed to capture ultrasonic conditions of an element of in the environment. The system may be configured to collect data representing the captured ultrasonic condition in a computer memory, on which a processor may execute an ultrasonic analysis algorithm. In embodiments, the sensed element may be one of a moving element, a rotating element, a structural element, and the like. In embodiments, the data may be streamed to the computer memory. In embodiments, the data may be continuously streamed. In embodiments, the data may be streamed for a duration of time, such as an ultrasonic condition sampling duration. In embodiments, the system may also include a data routing infrastructure that facilitates routing the streaming data from the ultrasonic sensor to a plurality of destinations including local and remote destinations. The routing infrastructure may include a hierarchical multiplexer that is adapted to route the streaming data and data from at least one other sensor to a destination.

In embodiments, ultrasonic monitoring in an industrial environment may be performed by a system for data collection as described herein on rotating elements (e.g., motor shafts and the like), bearings, fittings, couplings, housings, load bearing elements, and the like. The ultrasonic data may be used for pattern recognition, state determination, time-series analysis, and the like, any of which may be performed by computing resources of the industrial environment, which may include local computing resources (e.g., resources located within the environment and/or within a machine in the environment, and the like) and remote computing resources (e.g., cloud-based computing resources, and the like).

In embodiments, ultrasonic monitoring in an industrial environment by a system for data collection may be activated in response to a trigger (e.g., a signal from a motor indicating the motor is operational, and the like), a measure of time (e.g., an amount of time since the most recent monitoring activity, a time of day, a time relative to a trigger, an amount of time until a future event, such as machine shutdown, and the like), an external event (e.g., lightning strike, and the like). The ultrasonic monitoring may be activated in response to implementation of a smart band data collection activity. The ultrasonic monitoring may be activated in response to a data collection template being applied in the industrial environment. The data collection template may be configured based on analysis of prior vibration-caused failures that may be applicable to the monitored element, machine, environment, and the like. Because continuous monitoring of ultrasonic data may require dedicating data routing resources in the industrial environment for extended periods of time, a data collection template for continuous ultrasonic monitoring may be configured with data routing and resource utilization setup information that a controller of a data collection system may use to setup the resources to accommodate continuous ultrasonic monitoring. In an example, a data multiplexer may be configured to dedicate a portion of its outputs to the ultrasonic data for a duration of time specified in the template.

In embodiments, a system for data collection in an industrial environment may perform continuous ultrasonic monitoring. The system may also include processing of the ultrasonic data by a local processor located proximal to the vibration monitoring sensor or device(s). Depending on the computing capabilities of the local processor, functions such as peak detection may be performed. A programmable logic component may provide sufficient computing capabilities to perform peak detection. Processing of the ultrasonic data (local or remote) may provide feedback to a controller associated with the element(s) being monitored. The feedback may be used in a control loop to potentially adjust an operating condition, such as rotational speed, and the like, in an attempt to reduce or at least contain potential negative impact suggested by the ultrasonic data analysis.

In embodiments, a system for data collection in an industrial environment may perform ultrasonic monitoring, and in particular, continuous ultrasonic monitoring. The ultrasonic monitoring data may be combined with multi-dimensional models of an element or machine being monitored to produce a visualization of the ultrasonic data. In embodiments, an image, set of images, video, and the like may be produced that correlates in time with the sensed ultrasonic data. In embodiments, image recognition and/or analysis may be applied to ultrasonic visualizations to further facilitate determining the severity of a condition detected by the ultrasonic monitoring. The image analysis algorithms may be trained to detect normal and out of bounds conditions. Data from load sensors may be combined with ultrasonic data to facilitate testing materials and systems.

In embodiments, a system for data collection in an industrial environment may perform ultrasonic monitoring of a pipeline in an oil and gas pipeline application. Flows of petroleum through pipelines can create vibration and other mechanical effects that may contribute to structural changes in a liner of the pipeline, support members, flow boosters, regulators, diverters, and the like. Performing continuous ultrasonic monitoring of key elements in a pipeline may facilitate detecting early changes in material, such as joint fracturing, and the like, that may lead to failure. A system for data collection in an industrial environment may be configured with ultrasonic sensing devices that may be connected through signal data routing resources, such as crosspoint switches, multiplexers, and the like, to data collection and analysis nodes at which the collected ultrasonic data can be collected and analyzed. In embodiments, a data collection system may include a controller that may reference a data collection plan or template that includes information to facilitate configuring the data sampling, routing, and collection resources of the system to accommodate collecting ultrasonic sample data from a plurality of elements along the pipeline. The template may indicate a sequence for collecting ultrasonic data from a plurality of ultrasonic sensors and the controller may configure a multiplexer to route ultrasonic sensor data from a specified ultrasonic sensor to a destination, such as a data storage controller, analysis processor and the like, for a duration specified in the template. The controller may detect a sequence of collection in the template, or a sequence of templates to access, and respond to each template in the detected sequence, adjusting the multiplexer and the like to route the sensor data specified in each template to a collector.

In embodiments, a system for data collection in an industrial environment may perform ultrasonic monitoring of compressors in a power generation application. Compressors include several critical rotating elements (e.g., shaft, motor, and the like), rotational support elements (e.g., bearings, couplings, and the like), and the like. A system for data collection configured to facilitate sensing, routing, collection and analysis of ultrasonic data in a power generation application may receive ultrasonic sensor data from a plurality of ultrasonic sensors. Based on a configuration setup template, such as a template for collecting continuous ultrasonic data from one or more ultrasonic sensor devices, a controller may configure resources of the data collection system to facilitate delivery of the ultrasonic data over one or more signal data lines from the sensor(s) at least to data collectors that may be locally or remotely accessible. In embodiments, a template may indicate that ultrasonic data for a main shaft should be retrieved continuously for one minute, and then ultrasonic data for a secondary shaft should be retrieved for another minute, followed by ultrasonic data for a housing of the compressor. The controller may configure a multiplexer that receives the ultrasonic data for each of these sensors to route the data from each sensor in order by configuring a control set that initially directs the inputs from the main shaft ultrasonic sensors through the multiplexer until the time or other measure of data being forwarded is reached. The controller could switch the multiplexer to route the additional ultrasonic data as required to satisfy the second template requirements. The controller may continue adjusting the data collection system resources along the way until all of the ultrasonic monitoring data collection templates are satisfied.

In embodiments, a system for data collection in an industrial environment may perform ultrasonic monitoring of wind turbine gearboxes in a wind energy generation application. Gearboxes in wind turbines may experience a high degree of resistance in operation, due in part to the changing nature of wind, which may cause moving parts, such as the gear planes, hydraulic fluid pumps, regulators, and the like, to prematurely fail. A system for data collection in an industrial environment may be configured with ultrasonic sensors that capture information that may lead to early detection of potential failure modes of these high-strain elements. To ensure that ultrasonic data may be effectively acquired from several different ultrasonic sensors with sufficient coverage to facilitate producing an actionable ultrasonic imaging assessment, the system may be configured specifically to deliver sufficient data at a relatively high rate from one or more of the sensors. Routing channel(s) may be dedicated to transferring ultrasonic sensing data for a duration of time that may be specified in an ultrasonic data collection plan or template. To accomplish this, a controller, such as a programmable logic component, may configure a portion of a crosspoint switch and data collectors to deliver ultrasonic data from a first set of ultrasonic sensors (e.g., those that sense hydraulic fluid flow control elements) to a plurality of data collectors. Another portion of the crosspoint switch may be configured to route additional sensor data that may be useful for evaluating the ultrasonic data (e.g., motor on/off state, thermal condition of sensed parts, and the like) on other data channels to data collectors where the data can be combined and analyzed. The controller may reconfigure the data routing resources to enable collecting ultrasonic data from other elements based on a corresponding data collection template.

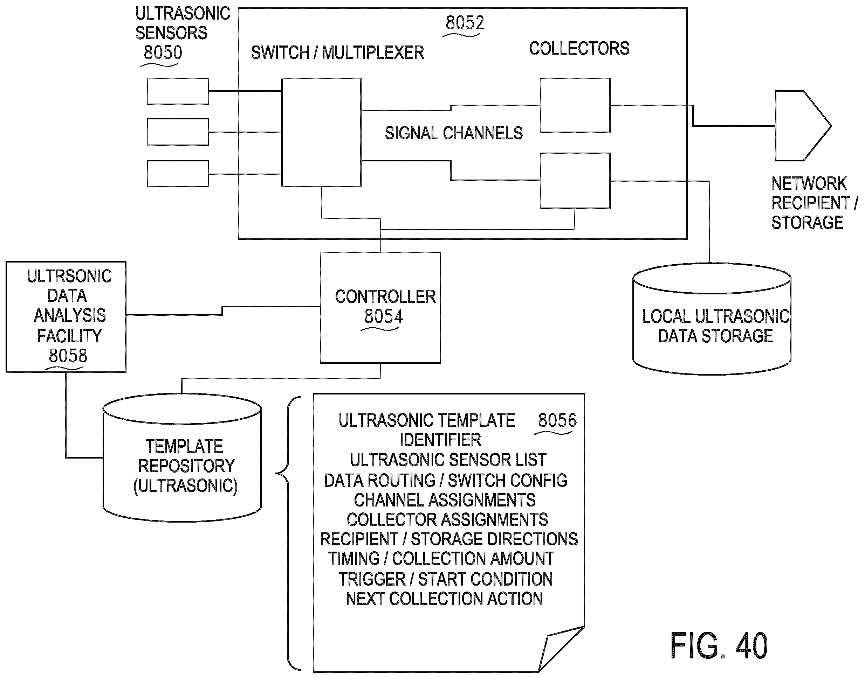

Referring to Figure 40, a system for data collection in an industrial environment may include one or more ultrasonic sensors 8050 that may connect to a data collection and routing system 8052 that may be configured by a controller 8054 based on an ultrasonic sensor-specific data collection template 8056 that may be provided to the controller 8054 by an ultrasonic data analysis facility 8058. The controller 8054 may configure resources of the data collection system 8052 and monitor the data collection fur a duration of time based on the requirements for data collection in the template 8056.

An example system for data collection in an industrial environment includes an ultrasonic sensor disposed to capture ultrasonic conditions of an element in the environment, a controller that configures data routing resources of the data collection system to route ultrasonic data being captured by the ultrasonic sensor to a destination location that is specified by an ultrasonic monitoring data collection template, and a processor executing an ultrasonic analysis algorithm on the data after arrival at the destination. In certain further embodiments, an example system includes: where the template defines a time interval of continuous ultrasonic data capture from the ultrasonic sensor; a data routing infrastructure that facilitates routing the streaming data from the ultrasonic sensor to a number of destinations including local and remote destinations; the routing infrastructure including a hierarchical multiplexer that is adapted to route the streaming data and data from at least one other sensor to a destination; where the element in the environment includes rotating elements, bearings, fittings, couplings, housing, and/or load bearing parts; where the template defines a condition of activation of continuous ultrasonic monitoring; and/or where the condition of activation includes a trigger, a smart-band, a template, an external event, and/or a regulatory compliance configuration.

An example system for data collection in an industrial environment includes an ultrasonic sensor disposed to capture ultrasonic conditions of an element of an industrial machine in the environment, a controller that configures data routing resources of the data collection system to route ultrasonic data being captured by the ultrasonic sensor to a destination location that is specified by an ultrasonic monitoring data collection template, and a processor executing an ultrasonic analysis algorithm on the data after arrival at the destination. In certain embodiments, an example system further includes: wherein the template defines a time interval of continuous ultrasonic data capture from the ultrasonic sensor; the system further including a data routing infrastructure that facilitates routing the data from the ultrasonic sensor to a number of destinations including local and remote destinations; the data routing infrastructure including a hierarchical multiplexer that is adapted to route the ultrasonic data and data from at least one other sensor to a destination; where the element of the industrial machine includes rotating elements, bearings, fittings, couplings, housing, and/or load bearing parts; where the template defines a condition of activation of continuous ultrasonic monitoring; and/or where the condition of activation includes a trigger, a smart-band, a template, an external event, and/or a regulatory compliance configuration.

An example method of continuous ultrasonic monitoring in an industrial environment includes disposing an ultrasonic monitoring device within ultrasonic monitoring range of at least one moving part of an industrial machine in the industrial environment, the ultrasonic monitoring device producing a stream of ultrasonic monitoring data, configuring, based on an ultrasonic monitoring data collection template, a data routing infrastructure to route the stream of ultrasonic monitoring data to a destination, where the infrastructure facilitates routing data from a number of sensors through at an analog crosspoint switch and/or a hierarchical multiplexer, to a number of destinations, routing the ultrasonic monitoring device data through the routing infrastructure to a destination; processing the stored data with an ultrasonic data analysis algorithm that provides an ultrasonic analysis of at least one of a motor shaft, bearings, fittings, couplings, housing, and load bearing parts; and/or storing the data in a computer accessible memory at the destination. Certain further embodiments of an example method include: where the data collection template defines a time interval of continuous ultrasonic data capture from the ultrasonic monitoring device; where configuring the data routing infrastructure includes configuring the hierarchical multiplexer to route the ultrasonic data and data from at least one other sensor to a destination; where ultrasonic monitoring is performed on at least one element in an industrial machine that includes rotating elements, bearings, fittings, couplings, a housing, and/or load bearing parts; where the template defines a condition of activation of continuous ultrasonic monitoring; where the condition of activation includes a trigger, a smart-band, a template, an external event, and/or a regulatory compliance configuration; where the ultrasonic data analysis algorithm performs pattern recognition; and/or where routing the ultrasonic monitoring device data is in response to detection of a condition in the industrial environment associated with the at least one moving part.

Without limitation, an example system for monitoring an oil or gas pipeline includes a processor executing an ultrasonic analysis algorithm on the pipeline data after arrival at the destination; an example system for monitoring a power generation compressor includes a processor executing an ultrasonic analysis algorithm on the power generation compressor data after arrival at the destination; and an example system for monitoring a wind turbine gearbox includes a processor executing an ultrasonic analysis algorithm on the gearbox data after arrival at the destination.

Industrial components such as pumps, compressors, air conditioning units, mixers, agitators, motors, and engines may play critical roles in the operation of equipment in a variety of environments including as part of manufacturing equipment in industrial environments such as factories, gas handling systems, mining operations, automotive systems, and the like.

There are a wide variety of pumps such as a variety of positive displacement pumps, velocity pumps, and impulse pumps. Velocity or centrifugal pumps typically comprise an impeller with curved blades which, when an impeller is immersed in a fluid, such as water or a gas, causes the fluid or gas to rotate in the same rotational direction as the impeller. As the fluid or gas rotates, centrifugal force causes it to move to the outer diameter of the pump, e.g., the pump housing, where it can be collected and further processed. The removal of the fluid or gas from the outer circumference may result in lower pressure at a pump input orifice causing new fluid or gas to be drawn into the pump.

Positive displacement pumps may comprise reciprocating pumps, progressive cavity pumps, gear or screw pumps, such as reciprocating pumps typically comprise a piston which alternately creates suction, which opens an inlet valve and draws a liquid or gas into a cylinder, and pressure, which closes the inlet valve and forces the liquid or gas present out of the cylinder through an outlet valve. This method of pumping may result in periodic waves of pressurized liquid or gas being introduced into the downstream system.

Some automotive vehicles such as cars and trucks may use a water cooling system to keep the engine from overheating. In some automobiles, a centrifugal water pump, driven by a belt associated with a driveshaft of the vehicle, is used to force a mixture of water and coolant through the engine to maintain an acceptable engine temperature. Overheating of the engine may be highly destructive to the engine and yet it may be difficult or costly to access a water pump installed in a vehicle.

In embodiments, a vehicle water pump may be equipped with a plurality of sensors for measuring attributes associated with the water pump such as temperature of bearings or pump housing, vibration of a driveshaft associated with the pump, liquid leakage, and the like. These sensors may be connected either directly to a monitoring device or through an intermediary device using a mix of wired and wireless connection techniques. A monitoring device may have access to detection values corresponding to the sensors where the detection values correspond directly to the sensor output or a processed version of the data output such as a digitized or sampled version of the sensor output, and/or a virtual sensor or modeled value correlated from other sensed values. The monitoring device may access and process the detection values using methods discussed elsewhere herein to evaluate the health of the water pump and various components of the water pump prone to wear and failure, e.g., bearings or sets of bearings, drive shafts, motors, and the like. The monitoring device may process the detection values to identify a torsion of the drive shaft of the pump. The identified torsion may then be evaluated relative to expected torsion based on the specific geometry of the water pump and how it is installed in the vehicle. Unexpected torsion may put undue stress on the driveshaft and may be a sign of deteriorating health of the pump. The monitoring device may process the detection values to identify unexpected vibrations in the shaft or unexpected temperature values or temperature changes in the bearings or in the housing in proximity to the bearings. In some embodiments, the sensors may include multiple temperature sensors positioned around the water pump to identify hot spots among the bearings or across the pump housing which might indicate potential bearing failure. The monitoring device may process the detection values associated with water sensors to identify liquid leakage near the pump which may indicate a bad seal. The detection values may be jointly analyzed to provide insight into the health of the pump.

In an illustrative example, detection values associated with a vehicle water pump may show a sudden increase in vibration at a higher frequency than the operational rotation of the pump with a corresponding localized increase of temperature associated with a specific phase in the pump cycle. Together these may indicate a localized bearing failure.

Production lines may also include one or more pumps for moving a variety of material including acidic or corrosive materials, flammable materials, minerals, fluids comprising particulates of varying sizes, high viscosity fluids, variable viscosity fluids, or high-density fluids. Production line pumps may be designed to specifically meet the needs of the production line including pump composition to handle the various material types, or torque needed to move the fluid at the desired speed or with the desired pressure. Because these production lines may be continuous process lines, it may be desirable to perform proactive maintenance rather than wait for a component to fail. Variations in pump speed and pressure may have the potential to negatively impact the final product, and the ability to identify issues in the final product may lag the actual component deterioration by an unacceptably long period.

In embodiments, an industrial pump may be equipped with a plurality of sensors for measuring attributes associated with the pump such as temperature of bearings or pump housing, vibration of a driveshaft associated with the pump, vibration of input or output lines, pressure, flow rate, fluid particulate measures, vibrations of the pump housing, and the like. These sensors may be connected either directly to a monitoring device or through an intermediary device using a mix of wired and wireless connection techniques. A monitoring device may have access to detection values corresponding to the sensors where the detection values correspond directly to the sensor output of a processed version of the data output such as a digitized or sampled version of the sensor output. The monitoring device may access and process the detection values using methods discussed elsewhere herein to evaluate the health of the pump overall, evaluate the health of pump components, predict potential down line issues arising from atypical pump performance, or changes in fluid being pumped. The monitoring device may process the detection values to identify torsion on the drive shaft of the pump. The identified torsion may then be evaluated relative to expected torsion based on the specific geometry of the pump and how it is installed in the equipment relative to other components on the assembly line. Unexpected torsion may put undue stress on the driveshaft and may be a sign of deteriorating health of the pump. Vibration of the inlet and outlet pipes may also be evaluated for unexpected or resonant vibrations which may be used to drive process controls to avoid certain pump frequencies. Changes in vibration may also be due to changes in fluid composition or density, amplifying or dampening vibrations at certain frequencies. The monitoring device may process the detection values to identify unexpected vibrations in the shaft, unexpected temperature values, or temperature changes in the bearings or in the housing in proximity to the bearings. In some embodiments, the sensors may include multiple temperature sensors positioned around the pump to identify hot spots among the bearings or across the pump housing which might indicated potential bearing failure. For some pumps, when the fluid being pumped is corrosive or contains large amounts of particulates, there may be damage to the interior components of the pump in contact with the fluid due to cumulative exposure to the fluid. This may be reflected in unanticipated variations in output pressure. Additionally or alternatively, if a gear in a gear pump begins to corrode and no longer forces all the trapped fluid out this may result in increased pump speed, fluid cavitation, and/or unexpected vibrations in the output pipe.

Compressors increase the pressure of a gas by decreasing the volume occupied by the gas or increasing the amount of the gas in a confined volume. There may be positive-displacement compressors that utilize the motion of pistons or rotary screws to move the gas into a pressurized holding chamber. There are dynamic displacement gas compressors that use centrifugal force to accelerate the gas into a stationary compressor where the kinetic energy is converted to pressure. Compressors may be used to compress various gases for use on an assembly line. Compressed air may power pneumatic equipment on an assembly line. In the oil and gas industry, flash gas compressors may be used to compress gas so that it leaves a hydrocarbon liquid when it enters a lower pressure environment. Compressors may be used to restore pressure in gas and oil pipelines, to mix fluids of interest, and/or to transfer or transport fluids of interest. Compressors may be used to enable the underground storage of natural gas.

Like pumps, compressors may be equipped with a plurality of sensors for measuring attributes associated with the compressor such as temperature of bearings or compressor housing, vibration of a driveshaft, transmission, gear box and the like associated with the compressor, vessel pressure, flow rate, and the like. These sensors may be connected either directly to a monitoring device or through an intermediary device using a mix of wired and wireless connection techniques. A monitoring device may have access to detection values corresponding to the sensors where the detection values correspond directly to the sensor output of a processed version of the data output such as a digitized or sampled version of the sensor output. The monitoring device may access and process the detection values using methods described elsewhere herein to evaluate the health of the compressor overall, evaluate the health of compressor components and/or predict potential down line issues arising from atypical compressor performance. The monitoring device may process the detection values to identify torsion on a driveshaft of the compressor. The identified torsion may then be evaluated relative to expected torsion based on the specific geometry of the compressor and how it is installed in the equipment relative to other components and pieces of equipment. Unexpected torsion may put undue stress on the driveshaft and may be a sign of deteriorating health of the compressor. Vibration of the inlet and outlet pipes may also be evaluated for unexpected or resonant vibrations which may be used to drive process controls to avoid certain compressor frequencies. The monitoring device may process the detection values to identify unexpected vibrations in the shaft, unexpected temperature values or temperature changes in the bearings or in the housing in proximity to the bearings. In some embodiments, the sensors may include multiple temperature sensors positioned around the compressor to identify hot spots among the bearings or across the compressor housing, which might indicate potential bearing failure. In some embodiments, sensors may monitor the pressure in a vessel storing the compressed gas. Changes in the pressure or rate of pressure change may be indicative of problems with the compressor.

Agitators and mixers are used in a variety of industrial environments. Agitators may be used to mix together different components such as liquids, solids, or gases. Agitators may be used to promote a more homogenous mixture of component materials. Agitators may be used to promote a chemical reaction by increasing exposure between different component materials and adding energy to the system. Agitators may be used to promote heat transfer to facilitate uniform heating or cooling of a material.

Mixers and agitators are used in such diverse industries as chemical production, food production, pharmaceutical production, and the like. There are paint and coating mixers, adhesive and sealant mixers, oil and gas mixers, water treatment mixers, wastewater treatment mixers, and the like.

Agitators may comprise equipment that rotates or agitates an entire tank or vessel in which the materials to be mixed are located, such as a concrete mixer. Effective agitations may be influenced by the number and shape of baffles in the interior of the tank. Agitation by rotation of the tank or vessel may be influenced by the axis of rotation relative to the shape of the tank, direction of rotation, and external forces such as gravity acting on the material in the tank. Factors affecting the efficacy of material agitation or mixing by agitation of the tank or vessel may include axes of rotation, and amplitude and frequency of vibration along different axes. These factors may be selected based on the types of materials being selected, their relative viscosities, specific gravities, particulate count, any shear thinning or shear thickening anticipated for the component materials or mixture, flow rates of material entering or exiting the vessel or tank, direction and location of flows of material entering of exiting the vessel, and the like.

Agitators, large tank mixers, portable tank mixers, tote tank mixers, drum mixers, and mounted mixers (with various mount types) may comprise a propeller or other mechanical device such as a blade, vane, or stator inserted into a tank of materials to be mixed, while rotating a propeller or otherwise moving a mechanical device. These may include airfoil impellers, fixed pitch blade impellers, variable pitch blade impellers, anti-ragging impellers, fixed radial blade impellers, marine-type propellers, collapsible airfoil impellers, collapsible pitched blade impellers, collapsible radial blade impellers, and variable pitch impellers. Agitators may be mounted such that the mechanical agitation is centered in the tank. Agitators may be mounted such that they are angled in a tank or are vertically or horizontally offset from the center of the vessel. The agitators may enter the tank from above, below, or the side of the tank. There may be a plurality of agitators in a single tank to achieve uniform mixing throughout the tank or container of chemicals.

Agitators may include the strategic flow or introduction of component materials into the vessel including the location and direction of entry, rate of entry, pressure of entry, viscosity of material, specific gravity of the material, and the like.

Successful agitation of mixing of materials may occur with a combination of techniques such as one or more propellers in a baffled tank where components are being introduced at different locations and at different rates.

In embodiments, an industrial mixer or agitator may be equipped with a plurality of sensors for measuring attributes associated with the industrial mixer such as: temperature of bearings or tank housing, vibration of driveshafts associated with a propeller or other mechanical device such as a blade, vane or stator, vibration of input or output lines, pressure, flow rate, fluid particulate measures, vibrations of the tank housing and the like. These sensors may be connected either directly to a monitoring device or through an intermediary device using a mix of wired and wireless connection techniques. A monitoring device may have access to detection values corresponding to the sensors where the detection values correspond directly to the sensor output of a processed version of the data, output such as a digitized or sampled version of the sensor output, fusion of data from multiple sensors, and the like. The monitoring device may access and process the detection values using methods discussed elsewhere herein to evaluate the health of the agitator or mixer overall, evaluate the health of agitator or mixer components, predict potential down line issues arising from atypical performance or changes in composition of material being agitated. For example, the monitoring device may process the detection values to identify torsion on the driveshaft of an agitating impeller. The identified torsion may then be evaluated relative to expected torsion based on the specific geometry of the agitator and how it is installed in the equipment relative to other components and/or pieces of equipment. Unexpected torsion may put undue stress on the driveshaft and may be a sign of deteriorating health of the agitator. Vibration of inflow and outflow pipes may be monitored for unexpected or resonant vibrations which may be used to drive process controls to avoid certain agitation frequencies. Inflow and outflow pipes may also be monitored for unexpected flow rates, unexpected particulate content, and the like. Changes in vibration may also be due to changes in fluid composition, or density amplifying or dampening vibrations at certain frequencies. The monitoring device may distribute sensors to collect detection values which may be used to identify unexpected vibrations in the shaft, or unexpected temperature values or temperature changes in the bearings or in the housing in proximity to the bearings. For some agitators, when the fluid being agitated is corrosive or contains large amounts of particulates, there may be damage to the interior components of the agitator (e.g., baffles, propellers, blades, and the like) which are in contact with the materials, due to cumulative exposure to the materials.

HVAC, air-conditioning systems, and the like may use a combination of compressors and fans to cool and circulate air in industrial environments. Similar to the discussion of compressors and agitators, these systems may include a number of rotating components whose failure or reduced performance might negatively impact the working environment and potentially degrade product quality. A monitoring device may be used to monitor sensors measuring various aspects of the one or more rotating components, the venting system, environmental conditions, and the like. Components of the HVAC/air-conditioning systems may include fan motors, driveshafts, bearings, compressors, and the like. The monitoring device may access and process the detection values corresponding to the sensor outputs according to methods discussed elsewhere herein to evaluate the overall health of the air-conditioning unit, HVAC system, and like as well as components of these systems, identify operational states, predict potential issues arising from atypical performance, and the like. Evaluation techniques may include bearing analysis, torsional analysis of driveshafts, rotors and stators, peak value detection, and the like. The monitoring device may process the detection values to identify issues such as torsion on a driveshaft, potential bearing failures, and the like.

Assembly line conveyors may comprise a number of moving and rotating components as part of a system for moving material through a manufacturing process. These assembly line conveyors may operate over a wide range of speeds. These conveyances may also vibrate at a variety of frequencies as they convey material horizontally to facilitate screening, grading, laning for packaging, spreading, dewatering, feeding product into the next in-line process, and the like.

Conveyance systems may include engines or motors, one or more driveshafts turning rollers or bearings along which a conveyor belt may move. A vibrating conveyor may include springs and a plurality of vibrators which vibrate the conveyor forward in a sinusoidal manner.

In embodiments, conveyors and vibrating conveyors may be equipped with a plurality of sensors for measuring attributes associated with the conveyor such as temperature of bearings, vibration of driveshafts, vibrations of rollers along which the conveyor travels, velocity and speed associated with the conveyor, and the like. The monitoring device may access and process the detection values using methods discussed elsewhere herein to evaluate the overall health of the conveyor as well as components of the conveyor, predict potential issues arising from atypical performance, and the like. Techniques for evaluating the conveyors may include bearing analysis, torsional analysis, phase detection/phase lock loops to align detection values from different parts of the conveyor, frequency transformations and frequency analysis, peak value detection, and the like. The monitoring device may process the detection values to identify torsion on a driveshaft, potential bearing failures, uneven conveyance and like.

In an illustrative example, a paper-mill conveyance system may comprise a mesh onto which the paper slurry is coated. The mesh transports the slurry as liquid evaporates and the paper dries. The paper may then be wound onto a core until the roll reaches diameters of up to three meters. The transport speeds of the paper-mill range from traditional equipment operating at 14-48 meters/minute to new, high-speed equipment operating at close to 2000 meters/minute. For slower machines, the paper may be winding onto the roll at 14 meters/minute which, towards the end of the roll having a diameter of approximately three meters would indicate that the take up roll may be rotating at speeds on the order of a couple of rotations a minute. Vibrations in the web conveyance or torsion across the take up roller may result in damage to the paper, skewing of the paper on the web, or skewed rolls which may result in equipment downtime or product that is lower in quality or unusable. Additionally, equipment failure may result in costly machine shutdowns and loss of product. Therefore, the ability to predict problems and provide preventative maintenance and the like may be useful.

Monitoring truck engines and steering systems to facilitate timely maintenance and avoid unexpected breakdowns may be important. Health of the combustion chamber, rotating crankshafts, bearings, and the like may be monitored using a monitoring device structured to interpret detection values received from a plurality of sensors measuring a variety of characteristics associated with engine components including temperature, torsion, vibration, and the like. As discussed above, the monitoring device may process the detection values to identify engine bearing health, torsional vibrations on a crankshaft/driveshaft, unexpected vibrations in the combustion chambers, overheating of different components, and the like. Processing may be done locally or data may be collected across a number of vehicles and jointly analyzed. The monitoring device may process detection values associated with the engine, combustion chambers, and the like. Sensors may monitor temperature, vibration, torsion, acoustics, and the like to identify issues. A monitoring device or system may use techniques such as peak detection, bearing analysis, torsion analysis, phase detection, PLL, band pass filtering, and the like to identify potential issues with the steering system and bearing and torsion analysis to identify potential issues with rotating components on the engine. This identification of potential issues may be used to schedule timely maintenance, reduce operation prior to maintenance, and influence future component design.

Drilling machines and screwdrivers in the oil and gas industries may be subjected to significant stresses. Because they are frequently situated in remote locations, an unexpected breakdown may result in extended down time due to the lead-time associated with bringing in replacement components. The health of a drilling machine or screwdriver and associated rotating crankshafts, bearings, and the like may be monitored using a monitoring device structured to interpret detection values received from a plurality of sensors measuring a variety of characteristics associated with the drilling machine or screwdriver including temperature, torsion, vibration, rotational speed, vertical speed, acceleration, image sensors, and the like. As discussed above, the monitoring device may process the detection values to identify equipment health, torsional vibrations on a crankshaft/driveshaft, unexpected vibrations in the component, overheating of different components, and the like. Processing may be done locally or data collected across a number of machines and jointly analyzed. The monitoring device may jointly process detection values, equipment maintenance records, product records, historical data, and the like to identify correlations between detection values, current and future states of the component, anticipated lifetime of the component or piece of equipment, and the like. Sensors may monitor temperature, vibration, torsion, acoustics, and the like to identify issues such as unanticipated torsion in the drill shaft, slippage in the gears, overheating, and the like. A monitoring device or system may use techniques such as peak detection, bearing analysis, torsion analysis, phase detection, PLL, band pass filtering, and the like to identify potential issues. This identification of potential issues may be used to schedule timely maintenance, order new or replacement components, reduce operation prior to maintenance, and influence future component design.

Similarly, it may be desirable to monitor the health of gearboxes operating in an oil and gas field. A monitoring device may be structured to interpret detection values received from a plurality of sensors measuring a variety of characteristics associated with the gearbox such as temperature, vibration, and the like. The monitoring device may process the detection values to identify gear and gearbox health and anticipated life. Processing may be done locally or data collected across a number of gearboxes and jointly analyzed. The monitoring device may jointly process detection values, equipment maintenance records, product records historical data, and the like to identify correlations between detection values, current and future states of the gearbox, anticipated lifetime of the gearbox and associated components, and the like. A monitoring device or system may use techniques such as peak detection, bearing analysis, torsion analysis, phase detection, PLL, band pass filtering, to identify potential issues. This identification of potential issues may be used to schedule timely maintenance, order new or replacement components, reduce operation prior to maintenance, and influence future equipment design.

Refining tanks in the oil and gas industries may be subjected to significant stresses due to the chemical reactions occurring inside. Because a breach in a tank could result in the release of potentially toxic chemicals, it may be beneficial to monitor the condition of the refining tank and associated components. Monitoring a refining tank to collect a variety of ongoing data may be used to predict equipment wear, component wear, unexpected stress, and the like. Given predictions about equipment health, such as the status of a refining tank, may be used to schedule timely maintenance, order new or replacement components, reduce operation prior to maintenance, and influence future component design. Similar to the discussion above, a refining tank may be monitored using a monitoring device structured to interpret detection values received from a plurality of sensors measuring a variety of characteristics associated with the refining tank such as temperature, vibration, internal and external pressure, the presence of liquid or gas at seams and ports, and the like. The monitoring device may process the detection values to identify equipment health, unexpected vibrations in the tank, overheating of the tank or uneven heating across the tank, and the like. Processing may be done locally or data collected across a number of tanks and jointly analyzed. The monitoring device may jointly process detection values, equipment maintenance records, product records historical data, and the like to identify correlations between detection values, current and future states of the tank, anticipated lifetime of the tank and associated components, and the like. A monitoring device or system may use techniques such as peak detection, bearing analysis, torsion analysis, phase detection, PLL, band pass filtering, and the like to identify potential issues.

Similarly, it may be desirable to monitor the health of centrifuges operating in an oil and gas refinery. A monitoring device may be structured to interpret detection values received from a plurality of sensors measuring a variety of characteristics associated with the centrifuge such as temperature, vibration, pressure, and the like. The monitoring device may process the detection values to identify equipment health, unexpected vibrations in the centrifuge, overheating, pressure across the centrifuge, and the like. Processing may be done locally or data collected across a number of centrifuges and jointly analyzed. The monitoring device may jointly process detection values, equipment maintenance records, product records historical data, and the like to identify correlations between detection values, current and future states of the centrifuge, anticipated lifetime of the centrifuge and associated components, and the like. A monitoring device or system may use techniques such as peak detection, bearing analysis, torsion analysis, phase detection, PLL, band pass filtering, to identify potential issues. This identification of potential issues may be used to schedule timely maintenance, order new or replacement components, reduce operation prior to maintenance and influence future equipment design.

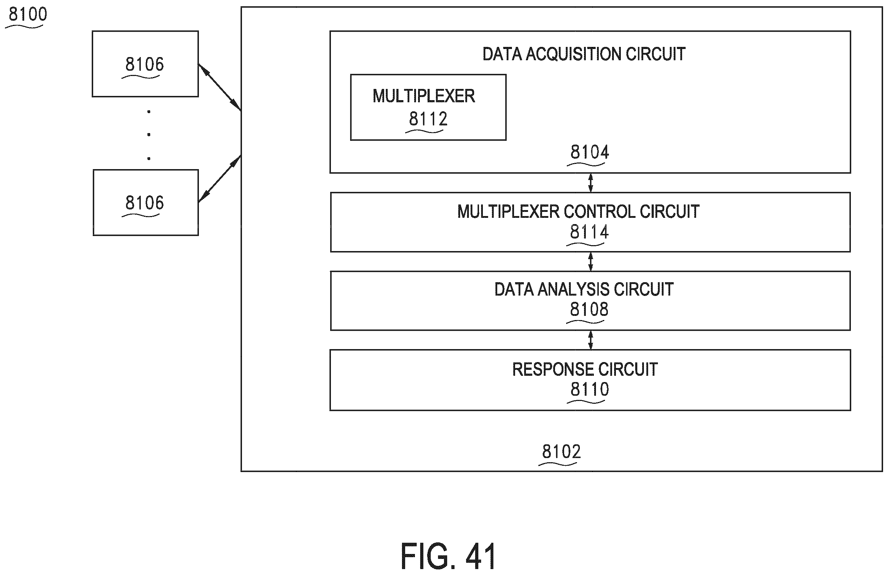

In embodiments, information about the health or other status or state information of or regarding a component or piece of industrial equipment may be obtained by monitoring the condition of various components throughout a process. Monitoring may include monitoring the amplitude of a sensor signal measuring attributes such as temperature, humidity, acceleration, displacement, and the like. An embodiment of a data monitoring device 8100 is shown in Figure 41 and may include a plurality of sensors 8106 communicatively coupled to a controller 8102. The controller 8102 may include a data acquisition circuit 8104, a data analysis circuit 8108, a MUX control circuit 8114, and a response circuit 8110. The data acquisition circuit 8104 may include a MUX 8112 where the inputs correspond to a subset of the detection values. The MUX control circuit 8114 may be structured to provide adaptive scheduling of the logical control of the MUX and the correspondence of MUX input and detected values based on a subset of the plurality of detection values and/or a command from the response circuit 8110 and/or the output of the data analysis circuit 8104. The data analysis circuit 8108 may comprise one or more of a peak detection circuit, a phase differential circuit, a PLL circuit, a bandpass filter circuit, a frequency transformation circuit, a frequency analysis circuit, a torsional analysis circuit, a bearing analysis circuit, an overload detection circuit, a sensor fault detection circuit, a vibrational resonance circuit for the identification of unfavorable interaction among machines or components, a distortion identification circuit for the identification of unfavorable distortions such as deflections shapes upon operation, overloading of weight, excessive forces, stress and strain-based effects, and the like. The data analysis circuit 8108 may output a component health status as a result of the analysis.

The data analysis circuit 8108 may determine a state, condition, or status of a component, part, subsystem, or the like of a machine, device, system or item of equipment (collectively referred to herein as a component health status) based on a maximum value of a MUX output for a given input or a rate of change of the value of a MUX output for a given input. The data analysis circuit 8108 may determine a component health status based on a time integration of the value of a MUX for a given input. The data analysis circuit 8108 may determine a component health status based on phase differential of MUX output relative to an on-board time or another sensor. The data analysis circuit 8108 may determine a component health status based on a relationship of value, phase, phase differential, and rate of change for MUX outputs corresponding to one or more input detection values. The data analysis circuit 8108 may determine a component health status based on process stage or component specification or component anticipated state.

The multiplexer control circuit 8114 may adapt the scheduling of the logical control of the multiplexer based on a component health status, an anticipated component health status, the type of component, the type of equipment being measured, an anticipated state of the equipment, a process stage (different parameters/-sensor values) may be important at different stages in a process. The multiplexer control circuit 8114 may adapt the scheduling of the logical control of the multiplexer based on a sequence selected by a user or a remote monitoring application, or on the basis of a user request for a specific value. The multiplexer control circuit 8114 may adapt the scheduling of the logical control of the multiplexer based on the basis of a storage profile or plan (such as based on type and availability of storage elements and parameters as described elsewhere in this ), network conditions or availability (also as described elsewhere in this disclosure), or value or cost of component or equipment.

The plurality of sensors 8106 may be wired to ports on the data acquisition circuit 8104. The plurality of sensors 8106 may be wirelessly connected to the data acquisition circuit 8104. The data acquisition circuit 8104 may be able to access detection values corresponding to the output of at least one of the plurality of sensors 8106 where the sensors 8106 may be capturing data on different operational aspects of a piece of equipment or an operating component.

The selection of the plurality of sensors 8106 for a data monitoring device 8100 designed for a specific component or piece of equipment may depend on a variety of considerations such as accessibility for installing new sensors, incorporation of sensors in the initial design, anticipated operational and failure conditions, resolution desired at various positions in a process or plant, reliability of the sensors, and the like. The impact of a failure, time response of a failure (e.g., warning time and/or off-nominal modes occurring before failure), likelihood of failure, and/or sensitivity required, and/or difficulty to detect failure conditions may drive the extent to which a component or piece of equipment is monitored with more sensors, and/or higher capability sensors being dedicated to systems where unexpected or undetected failure would be costly or have severe consequences.

Depending on the type of equipment, the component being measured, the environment in which the equipment is operating, and the like, sensors 8106 may comprise one or more of, without limitation, a vibration sensor, a thermometer, a hygrometer, a voltage sensor and/or a current sensor (for the component and/or other sensors measuring the component), an accelerometer, a velocity detector, a light or electromagnetic sensor (e.g., determining temperature, composition, and/or spectral analysis, and/or object position or movement), an image sensor, a structured light sensor, a laser-based image sensor, a thermal imager, an acoustic wave sensor, a displacement sensor, a turbidity meter, a viscosity meter, an axial load sensor, a radial load sensor, a tri-axial sensor, an accelerometer, a speedometer, a tachometer, a fluid pressure meter, an air flow meter, a horsepower meter, a flow rate meter, a fluid particle detector, an optical (laser) particle counter, an ultrasonic sensor, an acoustical sensor, a heat flux sensor, a galvanic sensor, a magnetometer, a pH sensor, and the like, including, without limitation, any of the sensors described throughout this disclosure.

The sensors 8106 may provide a stream of data over time that has a phase component, such as relating to acceleration or vibration, allowing for the evaluation of phase or frequency analysis of different operational aspects of a piece of equipment or an operating component. The sensors 8106 may provide a stream of data that is not conventionally phase-based, such as temperature, humidity, load, and the like. The sensors 8106 may provide a continuous or near continuous stream of data over time, periodic readings, event-driven readings, and/or readings according to a selected interval or schedule.

The sensors 8106 may monitor components such as bearings, sets of bearings, motors, driveshafts, pistons, pumps, conveyors, vibrating conveyors, compressors, drills, and the like in vehicles, oil and gas equipment in the field, in assembly line components, and the like.

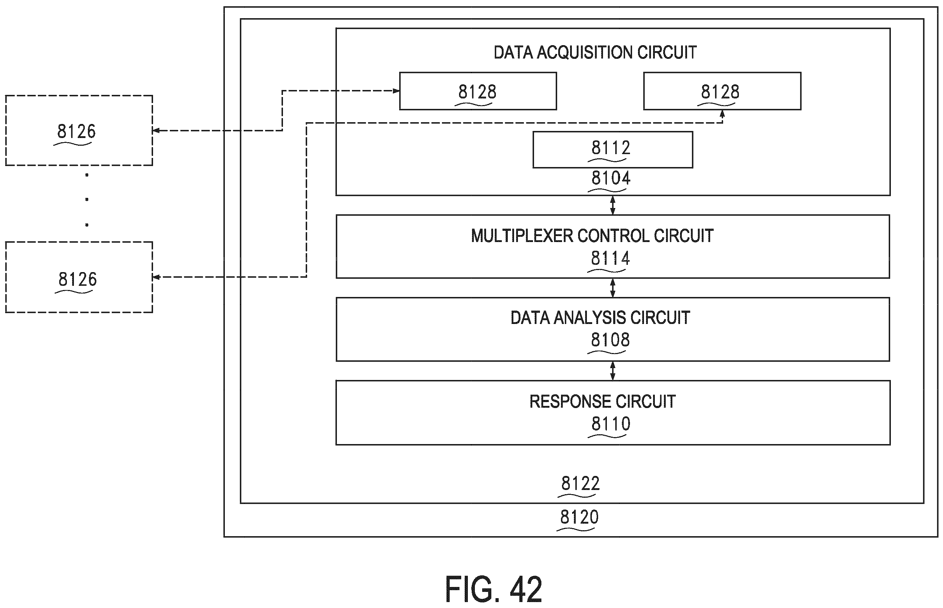

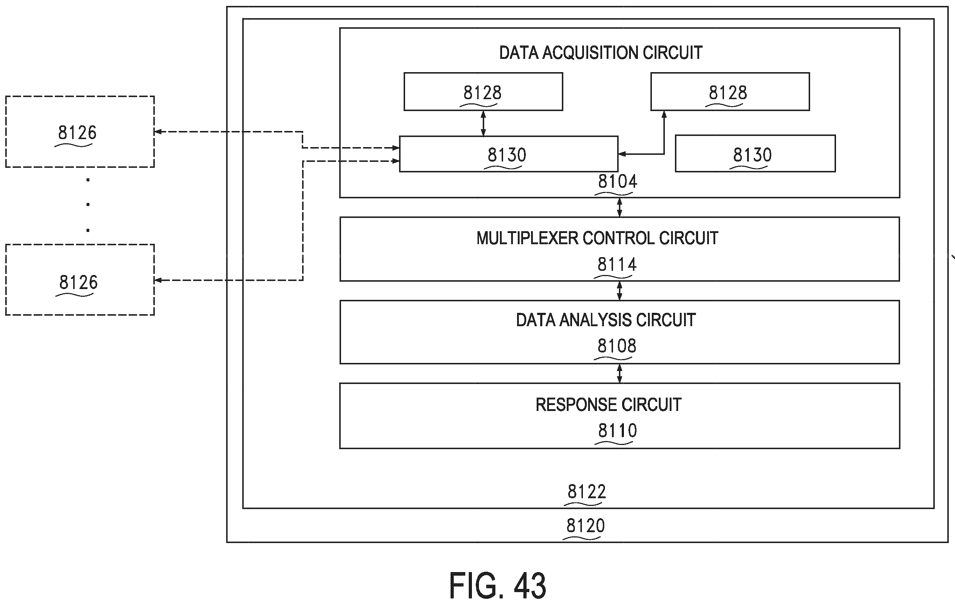

In embodiments, as illustrated in Figure 41, the sensors 8106 may be part of the data monitoring device 8100, referred to herein in some cases as a data collector, which in some cases may comprise a mobile or portable data collector. In embodiments, as illustrated in Figures 42 and 43, one or more external sensors 8126, which are not explicitly part of a monitoring device 8120 but rather are new, previously attached to or integrated into the equipment or component, may be opportunistically connected to, or accessed by the monitoring device 8120. The monitoring device 8120 may include a controller 8122. The controller 8122 may include a data acquisition circuit 8104, a data analysis circuit 8108, a MUX control circuit 8114, and a response circuit 8110. The data acquisition circuit 8104 may comprise a MUX 8112 where the inputs correspond to a subset of the detection values. The MUX control circuit 8114 may be structured to provide the logical control of the MUX and the correspondence of MUX input and detected values based on a subset of the plurality of detection values and/or a command from the response circuit 8110 and/or the output of the data analysis circuit 8108. The data analysis circuit 8108 may comprise one or more of a peak detection circuit, a phase differential circuit, a PLL circuit, a band-pass filter circuit, a frequency transformation circuit, a frequency analysis circuit, a torsional analysis circuit, a bearing analysis circuit, an overload detection circuit, vibrational resonance circuit for the identification of unfavorable interaction among machines or components, a distortion identification circuit for the identification of unfavorable distortions such as deflections shapes upon operation ,stress and strain-based effects, and the like.

The one or more external sensors 8126 may be directly connected to the one or more input ports 8128 on the data acquisition circuit 8104 of the controller 8122 or may be accessed by the data acquisition circuit 8104 wirelessly, such as by a reader, interrogator, or other wireless connection, such as over a short-distance wireless protocol. In embodiments, as shown in Figure 43, a data acquisition circuit 8104 may further comprise a wireless communication circuit 8130. The data acquisition circuit 8104 may use the wireless communication circuit 8130 to access detection values corresponding to the one or more external sensors 8126 wirelessly or via a separate source or some combination of these methods.

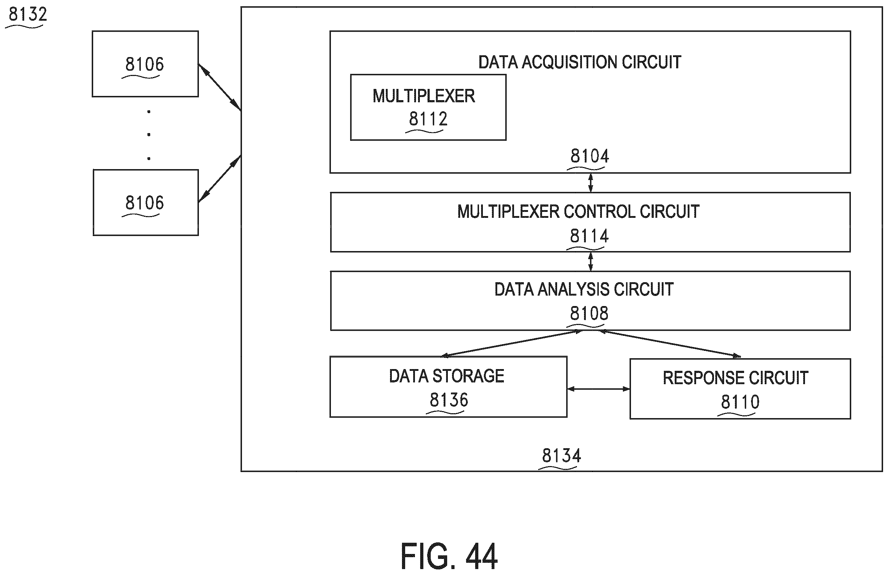

In embodiments, as illustrated in Figure 44, the controller 8134 may further comprise a data storage circuit 8136. The data storage circuit 8136 may be structured to store one or more of sensor specifications, component specifications, anticipated state information, detected values, multiplexer output, component models, and the like. The data storage circuit 8136 may provide specifications and anticipated state information to the data analysis circuit 8108.

In embodiments, the response circuit 8110 may initiate a variety of actions based on the sensor status provided by the data analysis circuit 8108. The response circuit 8110 may adjust a sensor scaling value (e.g., from 100 mV/gram to 10 mV/gram). The response circuit 8110 may select an alternate sensor from a plurality available. The response circuit 8110 may acquire data from a plurality of sensors of different ranges. The response circuit 8110 may recommend an alternate sensor. The response circuit 8110 may issue an alarm or an alert.

In embodiments, the response circuit 8110 may cause the data acquisition circuit 8104 to enable or disable the processing of detection values corresponding to certain sensors based on the component status. This may include switching to sensors having different response rates, sensitivity, ranges, and the like; accessing new sensors or types of sensors, accessing data from multiple sensors, and the like. Switching may be undertaken based on a model, a set of rules, or the like. In embodiments, switching may be under control of a machine learning system, such that switching is controlled based on one or more metrics of success, combined with input data, over a set of trials, which may occur under supervision of a human supervisor or under control of an automated system. Switching may involve switching from one input port to another (such as to switch from one sensor to another). Switching may involve altering the multiplexing of data, such as combining different streams under different circumstances. Switching may involve activating a system to obtain additional data, such as moving a mobile system (such as a robotic or drone system), to a location where different or additional data is available, such as positioning an image sensor for a different view or positioning a sonar sensor for a different direction of collection, or to a location where different sensors can be accessed, such as moving a collector to connect up to a sensor at a location in an environment by a wired or wireless connection. This switching may be implemented by directing changes to the multiplexer (MUX) control circuit 8114.

In embodiments, the response circuit 8110 may make recommendations for the replacement of certain sensors in the future with sensors having different response rates, sensitivity, ranges, and the like. The response circuit 8110 may recommend design alterations for future embodiments of the component, the piece of equipment, the operating conditions, the process, and the like.

In embodiments, the response circuit 8110 may recommend maintenance at an upcoming process stop or initiate a maintenance call where the maintenance may include the replacement of the sensor with the same or an alternate type of sensor having a different response rate, sensitivity, range, and the like. In embodiments, the response circuit 8110 may implement or recommend process changes - for example to lower the utilization of a component that is near a maintenance interval, operating off-nominally, or failed for purpose but is still at least partially operational, to change the operating speed of a component (such as to put it in a lower-demand mode), to initiate amelioration of an issue (such as to signal for additional lubrication of a roller bearing set, or to signal for an alignment process for a system that is out of balance), and the like.

In embodiments, the data analysis circuit 8108 and/or the response circuit 8110 may periodically store certain detection values and/or the output of the multiplexers and/or the data corresponding to the logic control of the MUX in the data storage circuit 8136 to enable the tracking of component performance over time. In embodiments, based on sensor status, as described elsewhere herein, recently measured sensor data and related operating conditions such as RPMs, component loads, temperatures, pressures, vibrations, or other sensor data of the types described throughout this disclosure in the data storage circuit 8136 enable the backing out of overloaded/failed sensor data. The signal evaluation circuit 8108 may store data at a higher data rate for greater granularity in future processing, the ability to reprocess at different sampling rates, and/or to enable diagnosing or post-processing of system information where operational data of interest is flagged, and the like.

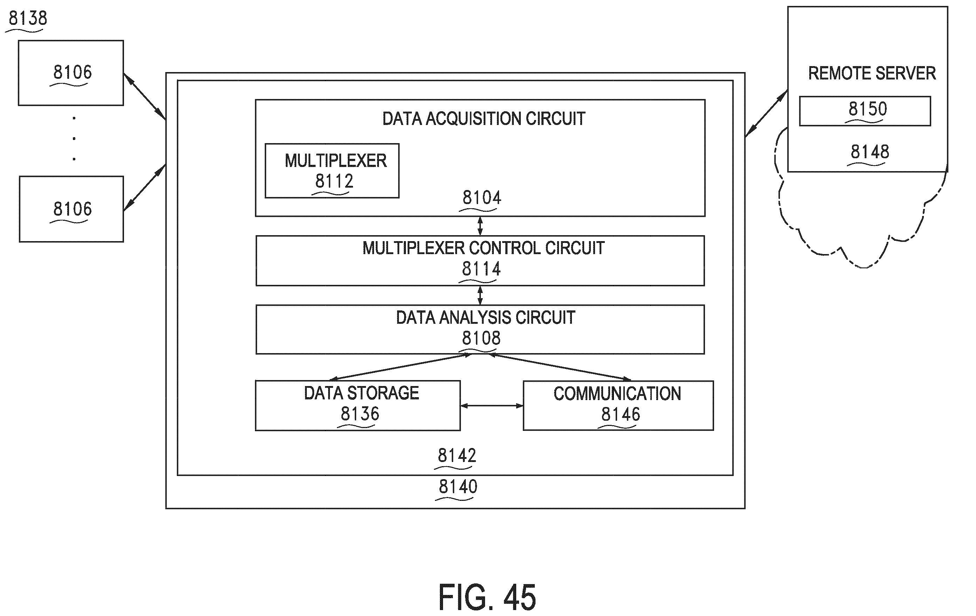

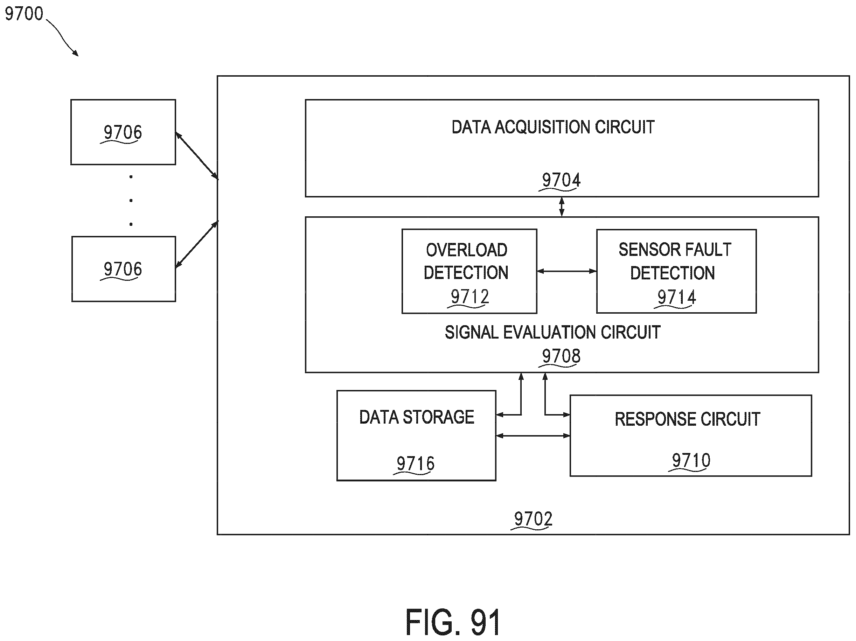

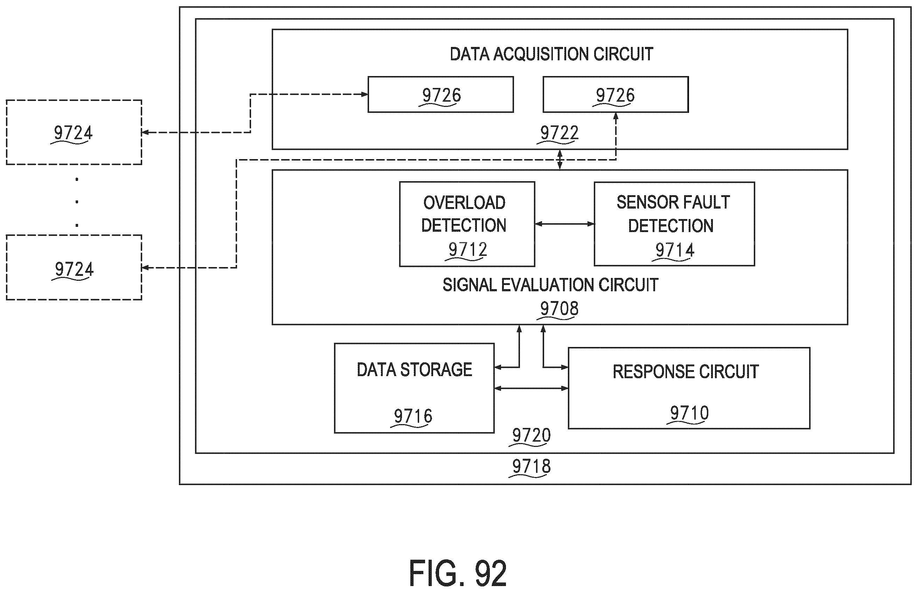

In embodiments, as shown in Figures 45, 46, 47, and 48, a data monitoring system 8138 may include at least one data monitoring device 8140. The at least one data monitoring device 8140 may include sensors 8106 and a controller 8142 comprising a data acquisition circuit 8104, a data analysis circuit 8108, a data storage circuit 8136, and a communication circuit 8146 to allow data and analysis to be transmitted to a monitoring application 8150 on a remote server 8148. The signal evaluation circuit 8108 may include at least an overload detection circuit (e.g., reference Figures 91 and 92) and/or a sensor fault detection circuit (e.g., reference Figures 91 and 92). The signal evaluation circuit 8108 may periodically share data with the communication circuit 8146 for transmittal to the remote server 8148 to enable the tracking of component and equipment performance over time and under varying conditions by a monitoring application 8150. Based on the sensor status, the signal evaluation circuit 8108 and/or response circuit 8110 may share data with the communication circuit 8146 for transmittal to the remote server 8148 based on the fit of data relative to one or more criteria. Data may include recent sensor data and additional data such as RPMs, component loads, temperatures, pressures, vibrations, and the like for transmittal. The signal evaluation circuit 8108 may share data at a higher data rate for transmittal to enable greater granularity in processing on the remote server.

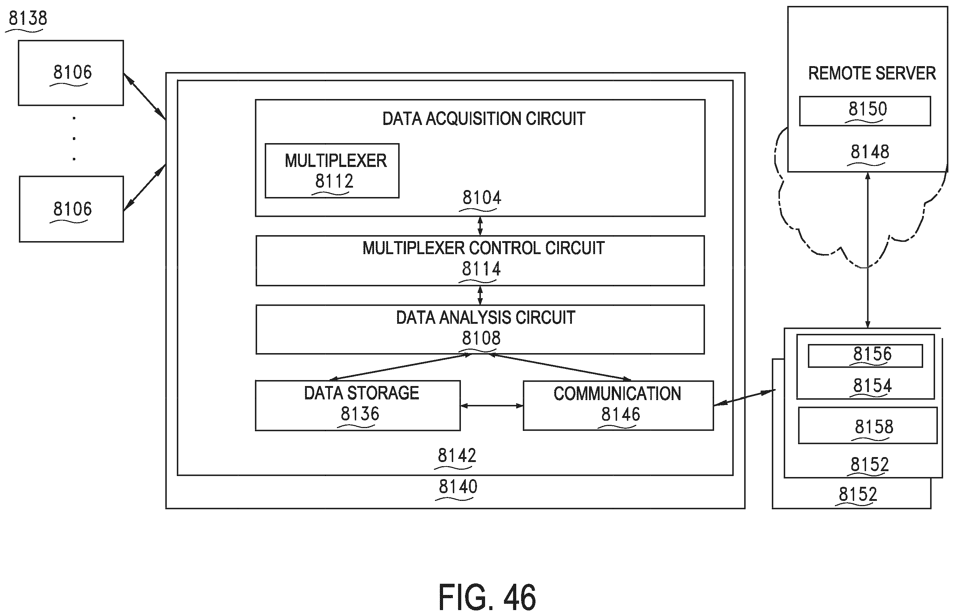

In embodiments, as shown in Figure 45, the communication circuit 8146 may communicate data directly to a remote server 8148. In embodiments, as shown in Figure 46, the communication circuit 8146 may communicate data to an intermediate computer 8152 which may include a processor 8154 running an operating system 8156 and a data storage circuit 8158.

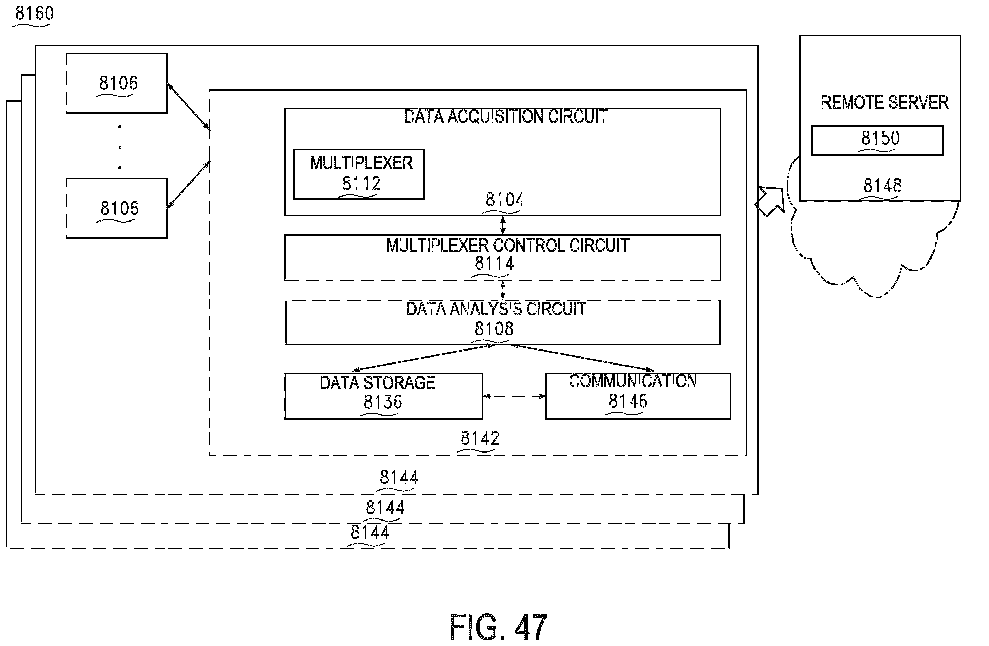

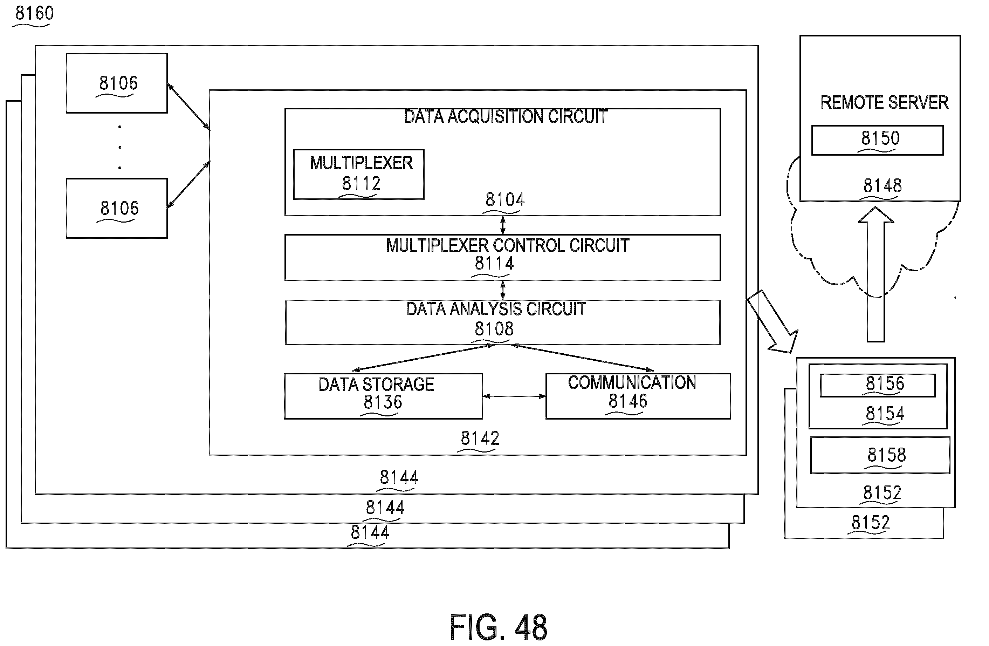

In embodiments as illustrated in Figures 47 and 48, a data collection system 8160 may have a plurality of monitoring devices 8144 collecting data on multiple components in a single piece of equipment, collecting data on the same component across a plurality of pieces of equipment, (both the same and different types of equipment) in the same facility, as well as collecting data from monitoring devices in multiple facilities. A monitoring application 8150 on a remote server 8148 may receive and store one or more of detection values, timing signals, and data coming from a plurality of the various monitoring devices 8144.

In embodiments, as shown in Figure 47, the communication circuit 8146 may communicate data directly to a remote server 8148. In embodiments, as shown in Figure 48, the communication circuit 8146 may communicate data to an intermediate computer 8152 which may include a processor 8154 running an operating system 8156 and a data storage circuit 8158. There may be an individual intermediate computer 8152 associated with each monitoring device 8140 or an individual intermediate computer 8152 may be associated with a plurality of monitoring devices 8144 where the intermediate computer 8152 may collect data from a plurality of data monitoring devices and send the cumulative data to the remote server 8148. Communication to the remote server 8148 may be streaming, batch (e.g., when a connection is available), or opportunistic.

The monitoring application 8150 may select subsets of the detection values to be jointly analyzed. Subsets for analysis may be selected based on a single type of sensor, component, or a single type of equipment in which a component is operating. Subsets for analysis may be selected or grouped based on common operating conditions such as size of load, operational condition (e.g., intermittent or continuous), operating speed or tachometer output, common ambient environmental conditions such as humidity, temperature, air or fluid particulate, and the like. Subsets for analysis may be selected based on the effects of other nearby equipment such as nearby machines rotating at similar frequencies, nearby equipment producing electromagnetic fields, nearby equipment producing heat, nearby equipment inducing movement or vibration, nearby equipment emitting vapors, chemicals or particulates, or other potentially interfering or intervening effects.

In embodiments, the monitoring application 8150 may analyze the selected subset. In an example, data from a single sensor may be analyzed over different time periods such as one operating cycle, several operating cycles, a month, a year, the life of the component, or the like. Data from multiple sensors of a common type measuring a common component type may also be analyzed over different time periods. Trends in the data such as changing rates of change associated with start-up or different points in the process may be identified. Correlation of trends and values for different sensors may be analyzed to identify those parameters whose short-term analysis might provide the best prediction regarding expected sensor performance. This information may be transmitted back to the monitoring device to update sensor models, sensor selection, sensor range, sensor scaling, sensor sampling frequency, types of data collected, and the like, and be analyzed locally or to influence the design of future monitoring devices.

In embodiments, the monitoring application 8150 may have access to equipment specifications, equipment geometry, component specifications, component materials, anticipated state information for a plurality of sensors, operational history, historical detection values, sensor life models, and the like for use analyzing the selected subset using rule-based or model-based analysis. The monitoring application 8150 may provide recommendations regarding sensor selection, additional data to collect, data to store with sensor data, and the like. The monitoring application 8150 may provide recommendations regarding scheduling repairs and/or maintenance. The monitoring application 8150 may provide recommendations regarding replacing a sensor. The replacement sensor may match the sensor being replaced or the replacement sensor may have a different range, sensitivity, sampling frequency, and the like.

In embodiments, the monitoring application 8150 may include a remote learning circuit structured to analyze sensor status data (e.g., sensor overload or sensor failure) together with data from other sensors, failure data on components being monitored, equipment being monitored, output being produced, and the like. The remote learning system may identify correlations between sensor overload and data from other sensors.

An example monitoring system for data collection in an industrial environment includes a data acquisition circuit that interprets a number of detection values, each of the detection values corresponding to input received from at least one of a number of input sensors, a MUX having inputs corresponding to a subset of the detection values, a MUX control circuit that interprets a subset of the number of detection values and provides the logical control of the MUX and the correspondence of MUX input and detected values as a result, where the logic control of the MUX includes adaptive scheduling of the select lines, a data analysis circuit that receives an output from the MUX and data corresponding to the logic control of the MUX resulting in a component health status, an analysis response circuit that performs an operation in response to the component health status, where the number of sensors includes at least two sensors such as a temperature sensor, a load sensor, a vibration sensor, an acoustic wave sensor, a heat flux sensor, an infrared sensor, an accelerometer, a tri-axial vibration sensor, and/or a tachometer. In certain further embodiments, an example system includes: where at least one of the number of detection values may correspond to a fusion of two or more input sensors representing a virtual sensor; where the system further includes a data storage circuit that stores at least one of component specifications and anticipated component state information and buffers a subset of the number of detection values for a predetermined length of time; where the system further includes a data storage circuit that stores at least one of a component specification and anticipated component state information and buffers the output of the MUX and data corresponding to the logic control of the MUX for a predetermined length of time; where the data analysis circuit includes a peak detection circuit, a phase detection circuit, a bandpass filter circuit, a frequency transformation circuit, a frequency analysis circuit, a PLL circuit, a torsional analysis circuit, and/or a bearing analysis circuit; where operation further includes storing additional data in the data storage circuit; where the operation includes at least one of enabling or disabling one or more portions of the MUX circuit; and/or where the operation includes causing the MUX control circuit to alter the logical control of the MUX and the correspondence of MUX input and detected values. In certain embodiments, the system includes at least two multiplexers; control of the correspondence of the multiplexer input and the detected values further includes controlling the connection of the output of a first multiplexer to an input of a second multiplexer; control of the correspondence of the multiplexer input and the detected values further comprises powering down at least a portion of one of the at least two multiplexers; and/or control of the correspondence of MUX input and detected values includes adaptive scheduling of the select lines. In certain embodiments, a data response circuit analyzes the stream of data from one or both MUXes, and recommends an action in response to the analysis.

An example testing system includes the testing system in communication with a number of analog and digital input sensors, a monitoring device including a data acquisition circuit that interprets a number of detection values, each of the number of detection values corresponding to at least one of the input sensors, a MUX having inputs corresponding to a subset of the detection values, a MUX control circuit that interprets a subset of the number of detection values and provides the logical control of the MUX and control of the correspondence of MUX input and detected values as a result, where the logic control of the MUX includes adaptive scheduling of the select lines, and a user interface enabled to accept scheduling input for select lines and display output of MUX and select line data.

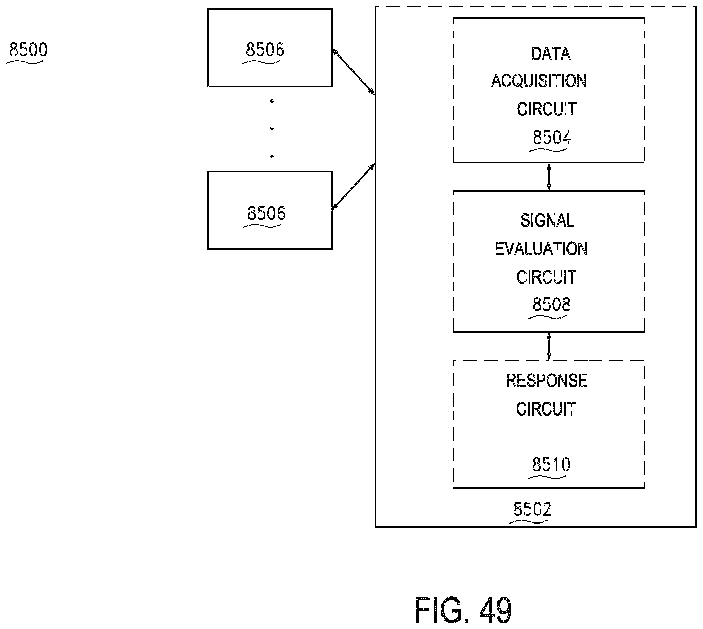

In embodiments, information about the health or other status or state information of or regarding a component or piece of industrial equipment may be obtained by looking at both the amplitude and phase or timing of data signals relative to related data signals, timers, reference signals or data measurements. An embodiment of a data monitoring device 8500 is shown in Figure 49 and may include a plurality of sensors 8506 communicatively coupled to a controller 8502. The controller 8502 may include a data acquisition circuit 8504, a signal evaluation circuit 8508 and a response circuit 8510. The plurality of sensors 8506 may be wired to ports on the data acquisition circuit 8504 or wirelessly in communication with the data acquisition circuit 8504. The plurality of sensors 8506 may be wirelessly connected to the data acquisition circuit 8504. The data acquisition circuit 8504 may be able to access detection values corresponding to the output of at least one of the plurality of sensors 8506 where the sensors 8506 may be capturing data on different operational aspects of a piece of equipment or an operating component.

The selection of the plurality of sensors 8506 for a data monitoring device 8500 designed for a specific component or piece of equipment may depend on a variety of considerations such as accessibility for installing new sensors, incorporation of sensors in the initial design, anticipated operational and failure conditions, reliability of the sensors, and the like. The impact of failure may drive the extent to which a component or piece of equipment is monitored with more sensors and/or higher capability sensors being dedicated to systems where unexpected or undetected failure would be costly or have severe consequences.

Depending on the type of equipment, the component being measured, the environment in which the equipment is operating and the like, sensors 8506 may comprise one or more of, without limitation, a vibration sensor, a thermometer, a hygrometer, a voltage sensor, a current sensor, an accelerometer, a velocity detector, a light or electromagnetic sensor (e.g., determining temperature, composition and/or spectral analysis, and/or object position or movement), an image sensor, a structured light sensor, a laser-based image sensor, an acoustic wave sensor, a displacement sensor, a turbidity meter, a viscosity meter, a load sensor, a tri-axial sensor, an accelerometer, a tachometer, a fluid pressure meter, an air flow meter, a horsepower meter, a flow rate meter, a fluid particle detector, an acoustical sensor, a pH sensor, and the like, including, without limitation, any of the sensors described throughout this disclosure.

The sensors 8506 may provide a stream of data over time that has a phase component, such as relating to acceleration or vibration, allowing for the evaluation of phase or frequency analysis of different operational aspects of a piece of equipment or an operating component. The sensors 8506 may provide a stream of data that is not conventionally phase-based, such as temperature, humidity, load, and the like. The sensors 8506 may provide a continuous or near continuous stream of data over time, periodic readings, event-driven readings, and/or readings according to a selected interval or schedule.

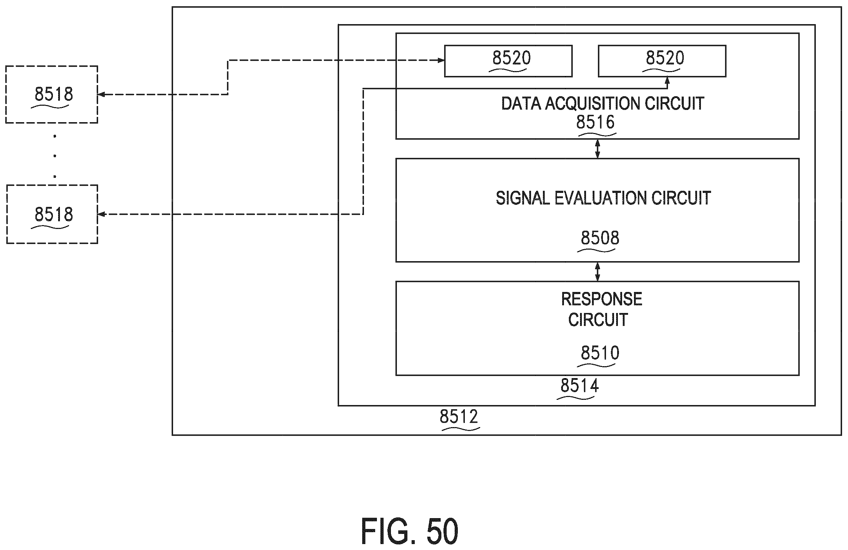

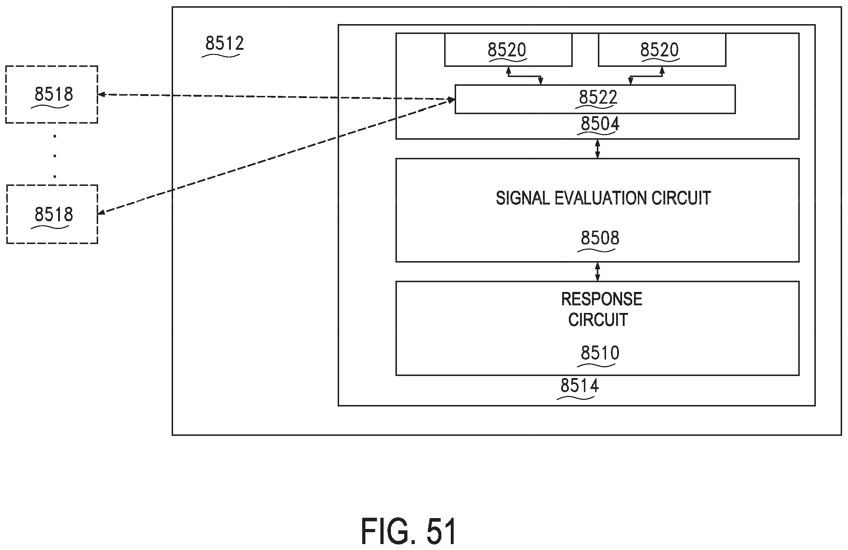

In embodiments, as illustrated in Figure 49, the sensors 8506 may be part of the data monitoring device 8500, referred to herein in some cases as a data collector, which in some cases may comprise a mobile or portable data collector. In embodiments, as illustrated in Figures 50 and 51, sensors 8518, either new or previously attached to or integrated into the equipment or component, may be opportunistically connected to or accessed by a monitoring device 8512. The sensors 8518 may be directly connected to input ports 8520 on the data acquisition circuit 8516 of a controller 8514 or may be accessed by the data acquisition circuit 8516 wirelessly, such as by a reader, interrogator, or other wireless connection, such as over a short-distance wireless protocol. In embodiments, a data acquisition circuit 8516 may access detection values corresponding to the sensors 8518 wirelessly or via a separate source or some combination of these methods. In embodiments, the data acquisition circuit 8504 may include a wireless communications circuit 8522 able to wirelessly receive data opportunistically from sensors 8518 in the vicinity and route the data to the input ports 8520 on the data acquisition circuit 8516.

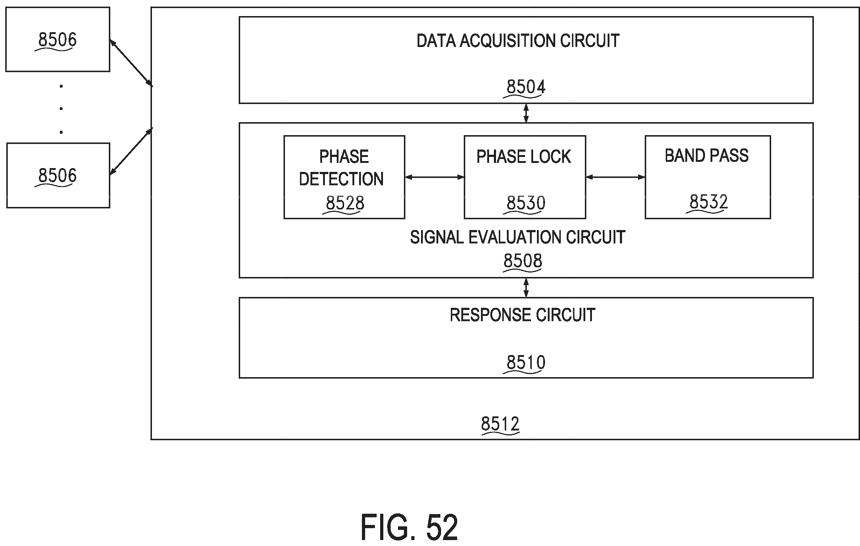

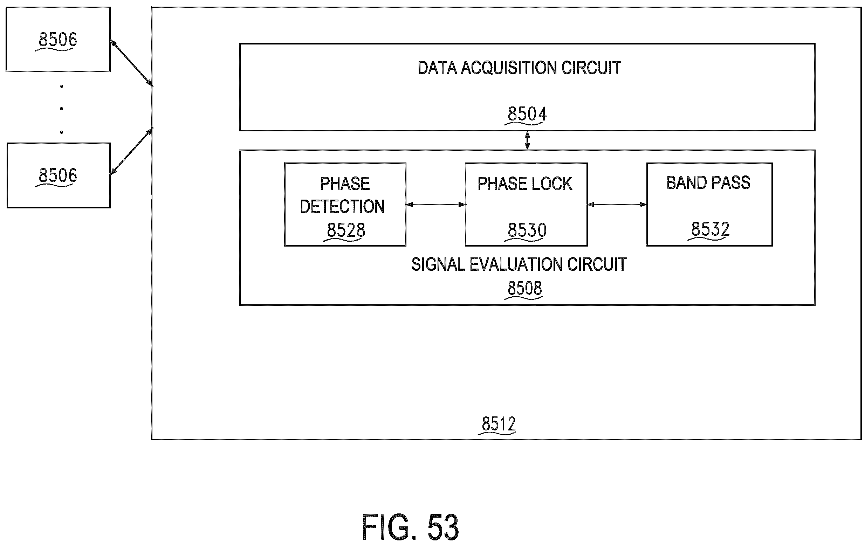

In an embodiment, as illustrated in Figures 52 and 53, the signal evaluation circuit 8508 may then process the detection values to obtain information about the component or piece of equipment being monitored. Information extracted by the signal evaluation circuit 8508 may comprise rotational speed, vibrational data including amplitudes, frequencies, phase, and/or acoustical data, and/or non-phase sensor data such as temperature, humidity, image data, and the like.

The signal evaluation circuit 8508 may include one or more components such as a phase detection circuit 8528 to determine a phase difference between two time-based signals, a phase lock loop circuit 8530 to adjust the relative phase of a signal such that it is aligned with a second signal, timer or reference signal, and/or a band pass filter circuit 8532 which may be used to separate out signals occurring at different frequencies. An example band pass filter circuit 8532 includes any filtering operations understood in the art, including at least a low-pass filter, a high-pass filter, and/or a band pass filter - for example to exclude or reduce frequencies that are not of interest for a particular determination, and/or to enhance the signal for frequencies of interest. Additionally, or alternatively, a band pass filter circuit 8532 includes one or more notch filters or other filtering mechanism to narrow ranges of frequencies (e.g., frequencies from a known source of noise). This may be used to filter out dominant frequency signals such as the overall rotation, and may help enable the evaluation of low amplitude signals at frequencies associated with torsion, bearing failure and the like.

In embodiments, understanding the relative differences may be enabled by a phase detection circuit 8528 to determine a phase difference between two signals. It may be of value to understand a relative phase offset, if any, between signals such as when a periodic vibration occurs relative to a relative rotation of a piece of equipment. In embodiments, there may be value in understanding where in a cycle shaft vibrations occur relative to a motor control input to better balance the control of the motor. This may be particularly true for systems and components that are operating at relative slow RPMs. Understanding of the phase difference between two signals or between those signals and a timer may enable establishing a relationship between a signal value and where it occurs in a process or rotation. Understanding relative phase differences may help in evaluating the relationship between different components of a system such as in the creation of a vibrational model for an Operational Deflection Shape (ODS).

The signal evaluation circuit 8544 may perform frequency analysis using techniques such as a digital Fast Fourier transform (FFT), Laplace transform, Z-transform, wavelet transform, other frequency domain transform, or other digital or analog signal analysis techniques, including, without limitation, complex analysis, including complex phase evolution analysis. An overall rotational speed or tachometer may be derived from data from sensors such as rotational velocity meters, accelerometers, displacement meters and the like. Additional frequencies of interest may also be identified. These may include frequencies near the overall rotational speed as well as frequencies higher than that of the rotational speed. These may include frequencies that are nonsynchronous with an overall rotational speed. Signals observed at frequencies that are multiples of the rotational speed may be due to bearing induced vibrations or other behaviors or situations involving bearings. In some instances, these frequencies may be in the range of one times the rotational speed, two times the rotational speed, three times the rotational speed, and the like, up to 3.15 to 15 times the rotational speed, or higher. In some embodiments, the signal evaluation circuit 8544 may select RC components for a band pass filter circuit 8532 based on overall rotational speed to create a band pass filter circuit 8532 to remove signals at expected frequencies such as the overall rotational speed, to facilitate identification of small amplitude signals at other frequencies. In embodiments, variable components may be selected, such that adjustments may be made in keeping with changes in the rotational speed, so that the band pass filter may be a variable band pass filter. This may occur under control of automatically self-adjusting circuit elements, or under control of a processor, including automated control based on a model of the circuit behavior, where a rotational speed indicator or other data is provided as a basis for control.

In embodiments, rather than performing frequency analysis, the signal evaluation circuit 8544 may utilize the time-based detection values to perform transitory signal analysis. These may include identifying abrupt changes in signal amplitude including changes where the change in amplitude exceeds a predetermined value or exists for a certain duration. In embodiments, the time-based sensor data may be aligned with a timer or reference signal allowing the time-based sensor data to be aligned with, for example, a time or location in a cycle. Additional processing to look at frequency changes over time may include the use of Short-Time Fourier Transforms (STFT) or a wavelet transform.

In embodiments, frequency-based techniques and time-based techniques may be combined, such as using time-based techniques to determine discrete time periods during which given operational modes or states are occurring and using frequency-based techniques to determine behavior within one or more of the discrete time periods.

In embodiments, the signal evaluation circuit may utilize demodulation techniques for signals obtained from equipment running at slow speeds such as paper and pulp machines, mining equipment, and the like. A signal evaluation circuit employing a demodulation technique may comprise a band-pass filter circuit, a rectifier circuit, and/or a low pass circuit prior to transforming the data to the frequency domain.

The response circuit 8510 8710 may further comprise evaluating the results of the signal evaluation circuit 8508 8544 and, based on certain criteria, initiating an action. Criteria may include a predetermined maximum or minimum value for a detection value from a specific sensor, a value of a sensor's corresponding detection value over time, a change in value, a rate of change in value, and/or an accumulated value (e.g., a time spent above/below a threshold value, a weighted time spent above/below one or more threshold values, and/or an area of the detected value above/below one or more threshold values). The criteria may include a sensor's detection values at certain frequencies or phases where the frequencies or phases may be based on the equipment geometry, equipment control schemes, system input, historical data, current operating conditions, and/or an anticipated response. The criteria may comprise combinations of data from different sensors such as relative values, relative changes in value, relative rates of change in value, relative values over time, and the like. The relative criteria may change with other data or information such as process stage, type of product being processed, type of equipment, ambient temperature and humidity, external vibrations from other equipment, and the like. The relative criteria may include level of synchronicity with an overall rotational speed, such as to differentiate between vibration induced by bearings and vibrations resulting from the equipment design. In embodiments, the criteria may be reflected in one or more calculated statistics or metrics (including ones generated by further calculations on multiple criteria or statistics), which in turn may be used for processing (such as on board a data collector or by an external system), such as to be provided as an input to one or more of the machine learning capabilities described in this disclosure, to a control system (which may be an on-board data collector or remote, such as to control selection of data inputs, multiplexing of sensor data, storage, or the like), or as a data element that is an input to another system, such as a data stream or data package that may be available to a data marketplace, a SCADA system, a remote control system, a maintenance system, an analytic system, or other system.

In an illustrative and non-limiting example, an alert may be issued if the vibrational amplitude and/or frequency exceeds a predetermined maximum value, if there is a change or rate of change that exceeds a predetermined acceptable range, and/or if an accumulated value based on vibrational amplitude and/or frequency exceeds a threshold. Certain embodiments are described herein as detected values exceeding thresholds or predetermined values, but detected values may also fall below thresholds or predetermined values - for example where an amount of change in the detected value is expected to occur, but detected values indicate that the change may not have occurred. For example, and without limitation, vibrational data may indicate system agitation levels, properly operating equipment, or the like, and vibrational data below amplitude and/or frequency thresholds may be an indication of a process that is not operating according to expectations. Except where the context clearly indicates otherwise, any description herein describing a determination of a value above a threshold and/or exceeding a predetermined or expected value is understood to include determination of a value below a threshold and/or falling below a predetermined or expected value.

The predetermined acceptable range may be based on anticipated system response or vibration based on the equipment geometry and control scheme such as number of bearings, relative rotational speed, influx of power to the system at a certain frequency, and the like. The predetermined acceptable range may also be based on long term analysis of detection values across a plurality of similar equipment and components and correlation of data with equipment failure. Based on vibration phase information, a physical location of a problem may be identified. Based on the vibration phase information system design flaws, off-nominal operation, and/or component or process failures may be identified. In some embodiments, an alert may be issued based on changes or rates of change in the data over time such as increasing amplitude or shifts in the frequencies or phases at which a vibration occurs. In some embodiments, an alert may be issued based on accumulated values such as time spent over a threshold, weighted time spent over one or more thresholds, and/or an area of a curve of the detected value over one or more thresholds. In embodiments, an alert may be issued based on a combination of data from different sensors such as relative changes in value, or relative rates of change in amplitude, frequency of phase in addition to values of non-phase sensors such as temperature, humidity and the like. For example, an increase in temperature and energy at certain frequencies may indicate a hot bearing that is starting to fail. In embodiments, the relative criteria for an alarm may change with other data or information such as process stage, type of product being processed on equipment, ambient temperature and humidity, external vibrations from other equipment and the like.

In embodiments, response circuit 8510 may cause the data acquisition circuit 8504 to enable or disable the processing of detection values corresponding to certain sensors based on the some of the criteria discussed above. This may include switching to sensors having different response rates, sensitivity, ranges, and the like; accessing new sensors or types of sensors, and the like. Switching may be undertaken based on a model, a set of rules, or the like. In embodiments, switching may be under control of a machine learning system, such that switching is controlled based on one or more metrics of success, combined with input data, over a set of trials, which may occur under supervision of a human supervisor or under control of an automated system. Switching may involve switching from one input port to another (such as to switch from one sensor to another). Switching may involve altering the multiplexing of data, such as combining different streams under different circumstances. Switching may involve activating a system to obtain additional data, such as moving a mobile system (such as a robotic or drone system), to a location where different or additional data is available (such as positioning an image sensor for a different view or positioning a sonar sensor for a different direction of collection) or to a location where different sensors can be accessed (such as moving a collector to connect up to a sensor that is disposed at a location in an environment by a wired or wireless connection). The response circuit 8510 may make recommendations for the replacement of certain sensors in the future with sensors having different response rates, sensitivity, ranges, and the like. The response circuit 8510 may recommend design alterations for future embodiments of the component, the piece of equipment, the operating conditions, the process, and the like.

In embodiments, the response circuit 8510 may recommend maintenance at an upcoming process stop or initiate a maintenance call. The response circuit 8510 may recommend changes in process or operating parameters to remotely balance the piece of equipment. In embodiments, the response circuit 8510 may implement or recommend process changes - for example to lower the utilization of a component that is near a maintenance interval, operating off-nominally, or failed for purpose but still at least partially operational, to change the operating speed of a component (such as to put it in a lower-demand mode), to initiate amelioration of an issue (such as to signal for additional lubrication of a roller bearing set, or to signal for an alignment process for a system that is out of balance), and the like.

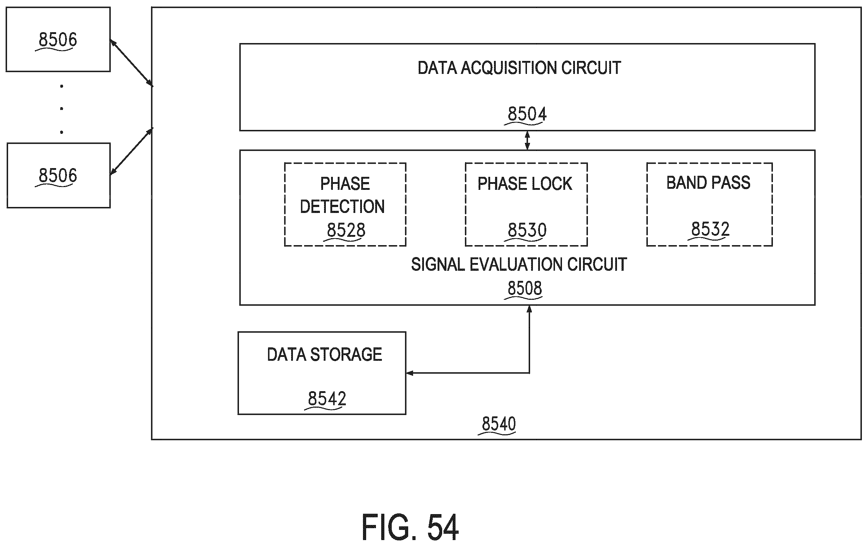

In embodiments, as shown in Figure 54, the data monitoring device 8540 may further comprise a data storage circuit 8542, memory, and the like. The signal evaluation circuit 8544 may periodically store certain detection values to enable the tracking of component performance over time.

In embodiments, based on relevant operating conditions and/or failure modes which may occur in as sensor values approach one or more criteria, the signal evaluation circuit 8544 may store data in the data storage circuit 8542 based on the fit of data relative to one or more criteria, such as those described throughout this disclosure. Based on one sensor input meeting or approaching specified criteria or range, the signal evaluation circuit 8544 may store additional data such as RPMs, component loads, temperatures, pressures, vibrations or other sensor data of the types described throughout this disclosure. The signal evaluation circuit 8544 may store data at a higher data rate for greater granularity in future processing, the ability to reprocess at different sampling rates, and/or to enable diagnosing or post-processing of system information where operational data of interest is flagged, and the like.

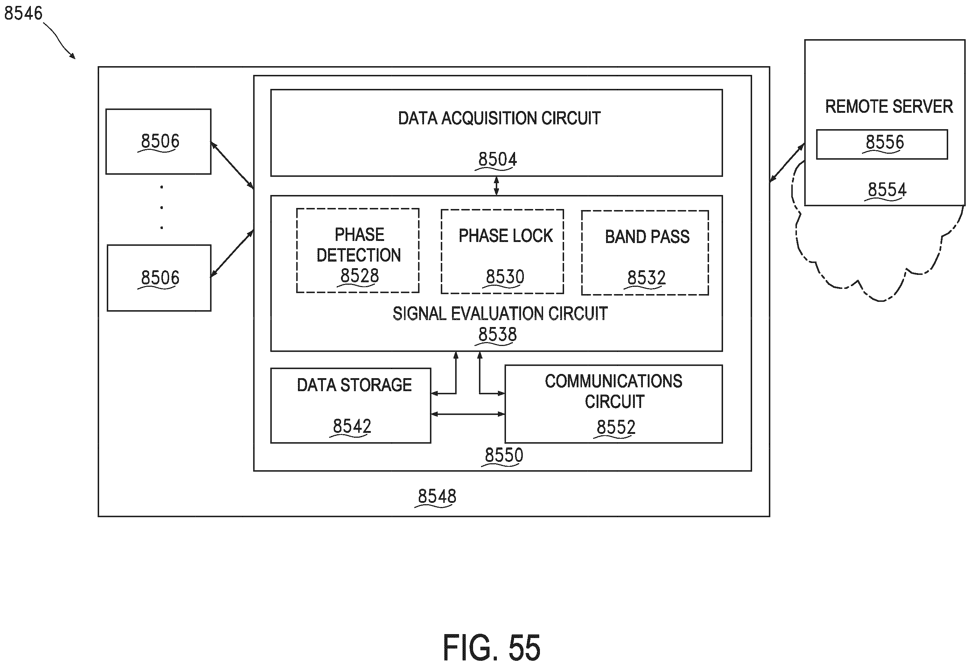

In embodiments, as shown in Figure 55, a data monitoring system 8546 may comprise at least one data monitoring device 8548. The at least one data monitoring device 8548 comprising sensors 8506, a controller 8550 comprising a data acquisition circuit 8504, a signal evaluation circuit 8538, a data storage circuit 8542, and a communications circuit 8552 to allow data and analysis to be transmitted to a monitoring application 8556 on a remote server 8554. The signal evaluation circuit 8538 may comprise at least one of a phase detection circuit 8528, a phase lock loop circuit 8530, and/or a band pass circuit 8532. The signal evaluation circuit 8538 may periodically share data with the communication circuit 8552 for transmittal to the remote server 8554 to enable the tracking of component and equipment performance over time and under varying conditions by a monitoring application 8556. Because relevant operating conditions and/or failure modes may occur as sensor values approach one or more criteria, the signal evaluation circuit 8538 may share data with the communication circuit 8552 for transmittal to the remote server 8554 based on the fit of data relative to one or more criteria. Based on one sensor input meeting or approaching specified criteria or range, the signal evaluation circuit 8538 may share additional data such as RPMs, component loads, temperatures, pressures, vibrations, and the like for transmittal. The signal evaluation circuit 8538 may share data at a higher data rate for transmittal to enable greater granularity in processing on the remote server.

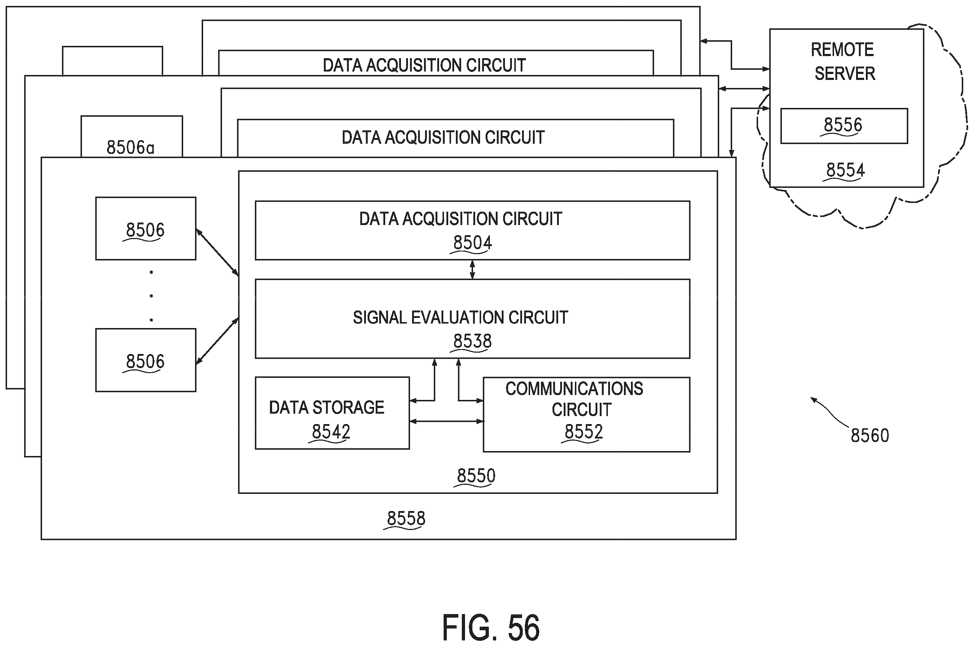

In embodiments, as illustrated in Figure 56, a data collection system 8560 may have a plurality of monitoring devices 8558 collecting data on multiple components in a single piece of equipment, collecting data on the same component across a plurality of pieces of equipment (both the same and different types of equipment) in the same facility, as well as collecting data from monitoring devices in multiple facilities. A monitoring application on a remote server may receive and store the data coming from a plurality of the various monitoring devices. The monitoring application may then select subsets of data which may be jointly analyzed. Subsets of monitoring data may be selected based on data from a single type of component or data from a single type of equipment in which the component is operating. Monitoring data may be selected or grouped based on common operating conditions such as size of load, operational condition (e.g., intermittent, continuous), operating speed or tachometer, common ambient environmental conditions such as humidity, temperature, air or fluid particulate, and the like. Monitoring data may be selected based on the effects of other nearby equipment, such as nearby machines rotating at similar frequencies, nearby equipment producing electromagnetic fields, nearby equipment producing heat, nearby equipment inducing movement or vibration, nearby equipment emitting vapors, chemicals or particulates, or other potentially interfering or intervening effects.

The monitoring application may then analyze the selected data set. For example, data from a single component may be analyzed over different time periods such as one operating cycle, several operating cycles, a month, a year, or the like. Data from multiple components of the same type may also be analyzed over different time periods. Trends in the data such as changes in frequency or amplitude may be correlated with failure and maintenance records associated with the same component or piece of equipment. Trends in the data such as changing rates of change associated with start-up or different points in the process may be identified. Additional data may be introduced into the analysis such as output product quality, output quantity (such as per unit of time), indicated success or failure of a process, and the like. Correlation of trends and values for different types of data may be analyzed to identify those parameters whose short-term analysis might provide the best prediction regarding expected performance. This information may be transmitted back to the monitoring device to update types of data collected and analyzed locally or to influence the design of future monitoring devices.

In an illustrative and non-limiting example, the monitoring device may be used to collect and process sensor data to measure mechanical torque. The monitoring device may be in communication with or include a high resolution, high speed vibration sensor to collect data over an extended period of time, enough to measure multiple cycles of rotation. For gear driven equipment, the sampling resolution should be such that the number of samples taken per cycle is at least equal to the number of gear teeth driving the component. It will be understood that a lower sampling resolution may also be utilized, which may result in a lower confidence determination and/or taking data over a longer period of time to develop sufficient statistical confidence. This data may then be used in the generation of a phase reference (relative probe) or tachometer signal for a piece of equipment. This phase reference may be used to align phase data such as vibrational data or acceleration data from multiple sensors located at different positions on a component or on different components within a system. This information may facilitate the determination of torque for different components or the generation of an Operational Deflection Shape (ODS), indicating the extent of mechanical deflection of one or more components during an operational mode, which in turn may be used to measure mechanical torque in the component.

The higher resolution data stream may provide additional data for the detection of transitory signals in low speed operations. The identification of transitory signals may enable the identification of defects in a piece of equipment or component

In an illustrative and non-limiting example, the monitoring device may be used to identify mechanical jitter for use in failure prediction models. The monitoring device may begin acquiring data when the piece of equipment starts up through ramping up to operating speed and then during operation. Once at operating speed, it is anticipated that the torsional jitter should be minimal and changes in torsion during this phase may be indicative of cracks, bearing faults and the like. Additionally, known torsions may be removed from the signal to facilitate in the identification of unanticipated torsions resulting from system design flaws or component wear. Having phase information associated with the data collected at operating speed may facilitate identification of a location of vibration and potential component wear. Relative phase information for a plurality of sensors located throughout a machine may facilitate the evaluation of torsion as it is propagated through a piece of equipment.

An example system data collection in an industrial environment includes a data acquisition circuit that interprets a number of detection values from a number of input sensors communicatively coupled to the data acquisition circuit, each of the number of detection values corresponding to at least one of the input sensors, a signal evaluation circuit that obtains at least one of a vibration amplitude, a vibration frequency and a vibration phase location corresponding to at least one of the input sensors in response to the number of detection values, and a response circuit that performs at least one operation in response to at the at least one of the vibration amplitude, the vibration frequency and the vibration phase location. Certain further embodiments of an example system include: where the signal evaluation circuit includes a phase detection circuit, or a phase detection circuit and a phase lock loop circuit and/or a band pass filter; where the number of input sensors includes at least two input sensors providing phase information and at least one input sensor providing non-phase sensor information; the signal evaluation circuit further aligning the phase information provided by the at least two of the input sensors; where the at least one operation is further in response to at least one of: a change in magnitude of the vibration amplitude; a change in frequency or phase of vibration; a rate of change in at least one of vibration amplitude, vibration frequency and vibration phase; a relative change in value between at least two of vibration amplitude, vibration frequency and vibration phase; and/or a relative rate of change between at least two of vibration amplitude, vibration frequency, and vibration phase; the system further including an alert circuit, where the at least one operation includes providing an alert and where the alert may be one of haptic, audible and visual; a data storage circuit, where at least one of the vibration amplitude, vibration frequency, and vibration phase is stored periodically to create a vibration history, and where the at least one operation includes storing additional data in the data storage circuit (e.g., as a vibration fingerprint for a component); where the storing additional data in the data storage circuit is further in response to at least one of: a change in magnitude of the vibration amplitude; a change in frequency or phase of vibration; a rate of change in the vibration amplitude, frequency or phase; a relative change in value between at least two of vibration amplitude, frequency and phase; and a relative rate of change between at least two of vibration amplitude, frequency and phase; the system further comprising at least one of a multiplexing (MUX) circuit whereby alternative combinations of detection values may be selected based on at least one of user input, a detected state, and a selected operating parameter for a machine; where each of the number of detection values corresponds to at least one of the input sensors; where the at least one operation includes enabling or disabling the connection of one or more portions of the multiplexing circuit; a MUX control circuit that interprets a subset of the number of detection values and provides the logical control of the MUX and the correspondence of MUX input and detected values as a result; and/or where the logic control of the MUX includes adaptive scheduling of the select lines.

An example method of monitoring a component, includes receiving time-based data from at least one sensor, phase-locking the received data with a reference signal, transforming the received time-based data to frequency data, filtering the frequency data to remove tachometer frequencies, identifying low amplitude signals occurring at high frequencies, and activating an alarm if a low amplitude signal exceeds a threshold.

An example system for data collection, processing, and utilization of signals in an industrial environment includes a plurality of monitoring devices, each monitoring device comprising a data acquisition circuit structured to interpret a plurality of detection values from a plurality of input sensors communicatively coupled to the data acquisition circuit, each of the plurality of detection values corresponding to at least one of the input sensors; a signal evaluation circuit structured to obtain at least one of vibration amplitude, vibration frequency and a vibration phase location corresponding to at least one of the input sensors in response to the corresponding at least one of the plurality of detection values; a data storage facility for storing a subset of the plurality of detection values; a communication circuit structured to communicate at least one selected detection value to a remote server; and a monitoring application on the remote server structured to: receive the at least one selected detection value; jointly analyze a subset of the detection values received from the plurality of monitoring devices; and recommend an action.

In certain further embodiments, an example system includes: for each monitoring device, the plurality of input sensors include at least one input sensor providing phase information and at least one input sensor providing non-phase input sensor information and where joint analysis includes using the phase information from the plurality of monitoring devices to align the information from the plurality of monitoring devices; where the subset of detection values is selected based on data associated with a detection value including at least one: common type of component, common type of equipment, and common operating conditions and further selected based on one of anticipated life of a component associated with detection values, type of the equipment associated with detection values, and operational conditions under which detection values were measured; and/or where the analysis of the subset of detection values includes feeding a neural net with the subset of detection values and supplemental information to learn to recognize various operating states, health states, life expectancies and fault states utilizing deep learning techniques, wherein the supplemental information comprises one of component specification, component performance, equipment specification, equipment performance, maintenance records, repair records and an anticipated state model.

An example system for data collection in an industrial environment includes a data acquisition circuit structured to interpret a plurality of detection values from a plurality of input sensors communicatively coupled to the data acquisition circuit, each of the plurality of detection values corresponding to at least one of the input sensors; a signal evaluation circuit structured to obtain at least one of vibration amplitude, vibration frequency and vibration phase location corresponding to at least one of the input sensors in response to the corresponding at least one of a plurality of detection values; a multiplexing circuit whereby alternative combinations of the detection values may be selected based on at least one of user input, a detected state and a selected operating parameter for a machine, each of the plurality of detection values corresponding to at least one of the input sensors; and a response circuit structured to perform at least one operation in response to at the at least one of the vibration amplitude, vibration frequency and vibration phase location.

An example system for data collection in a piece of equipment, includes a data acquisition circuit structured to interpret a plurality of detection values from a plurality of input sensors communicatively coupled to the data acquisition circuit, each of the plurality of detection values corresponding to at least one of the input sensors; a timer circuit structured to generate a timing signal based on a first detected value of the plurality of detection values; a signal evaluation circuit structured to obtain at least one of vibration amplitude, vibration frequency and vibration phase location corresponding to a second detected value comprising: a phase detection circuit structured to determine a relative phase difference between a second detection value of the plurality of detection values and the timing signal; and a response circuit structured to perform at least one operation in response to at the at least one of the vibration amplitude, vibration frequency and vibration phase location.

An example system for bearing analysis in an industrial environment, includes a data acquisition circuit structured to interpret a plurality of detection values from a plurality of input sensors communicatively coupled to the data acquisition circuit, each of the plurality of detection values corresponding to at least one of the input sensors; a data storage for storing specifications and anticipated state information for a plurality of bearing types and buffering the plurality of detection values for a predetermined length of time; a timer circuit structured to generate a timing signal based on a first detected value of the plurality of detection values; a bearing analysis circuit structured to analyze buffered detection values relative to specifications and anticipated state information resulting in a life prediction comprising: a phase detection circuit structured to determine a relative phase difference between a second detection value of the plurality of detection values and the timing signal; and a signal evaluation circuit structured to obtain at least one of vibration amplitude, vibration frequency and vibration phase location corresponding to a second detected value: and a response circuit structured to perform at least one operation in response to at the at least one of the vibration amplitude, vibration frequency and vibration phase location.

An example motor monitoring system includes: a data acquisition circuit structured to interpret a plurality of detection values from a plurality of input sensors communicatively coupled to the data acquisition circuit, each of the plurality of detection values corresponding to at least one of the input sensors; a data storage circuit structured to store specifications, system geometry, and anticipated state information for the motor and motor components, store historical motor performance and buffer the plurality of detection values for a predetermined length of time; a timer circuit structured to generate a timing signal based on a first detected value of the plurality of detection values; a motor analysis circuit structured to analyze buffered detection values relative to specifications and anticipated state information resulting in a motor performance parameter comprising: a phase detection circuit structured to determine a relative phase difference between a second detection value of the plurality of detection values and the timing signal; and a signal evaluation circuit structured to obtain at least one of vibration amplitude, vibration frequency and vibration phase location corresponding to a second detected value and analyze the at least one of vibration amplitude, vibration frequency and vibration phase location relative to buffered detection values, specifications and anticipated state information resulting in a motor performance parameter; and a response circuit structured to perform at least one operation in response to at the at least one of vibration amplitude, vibration frequency and vibration phase location and motor performance parameter.

An example system for estimating a vehicle steering system performance parameter, includes: a data acquisition circuit structured to interpret a plurality of detection values from a plurality of input sensors communicatively coupled to the data acquisition circuit, each of the plurality of detection values corresponding to at least one of the input sensors; a data storage circuit structured to store specifications, system geometry, and anticipated state information for the vehicle steering system, the rack, the pinion, and the steering column, store historical steering system performance and buffer the plurality of detection values for a predetermined length of time;

a timer circuit structured to generate a timing signal based on a first detected value of the plurality of detection values; a steering system analysis circuit structured to analyze buffered detection values relative to specifications and anticipated state information resulting in a steering system performance parameter comprising: a phase detection circuit structured to determine a relative phase difference between a second detection value of the plurality of detection values and the timing signal; and a signal evaluation circuit structured to obtain at least one of vibration amplitude, vibration frequency and vibration phase location corresponding to a second detected value and analyze the at least one of vibration amplitude, vibration frequency and vibration phase location relative to buffered detection values, specifications and anticipated state information resulting in a steering system performance parameter; and a response circuit structured to perform at least one operation in response to at the at least one of vibration amplitude, vibration frequency and vibration phase location and the steering system performance parameter.

An example system for estimating a health parameter a pump performance parameter includes a data acquisition circuit structured to interpret a plurality of detection values from a plurality of input sensors communicatively coupled to the data acquisition circuit, each of the plurality of detection values corresponding to at least one of the input sensors; a data storage circuit structured to store specifications, system geometry, and anticipated state information for the pump and pump components associated with the detection values, store historical pump performance and buffer the plurality of detection values for a predetermined length of time; a timer circuit structured to generate a timing signal based on a first detected value of the plurality of detection values; a pump analysis circuit structured to analyze buffered detection values relative to specifications and anticipated state information resulting in a pump performance parameter comprising: a phase detection circuit structured to determine a relative phase difference between a second detection value of the plurality of detection values and the timing signal; and a signal evaluation circuit structured to obtain at least one of vibration amplitude, vibration frequency and vibration phase location corresponding to a second detected value and analyze the at least one of vibration amplitude, vibration frequency and vibration phase location relative to buffered detection values, specifications and anticipated state information resulting in a pump performance parameter; and a response circuit structured to perform at least one operation in response to at the at least one of vibration amplitude, vibration frequency and vibration phase location and the pump performance parameter, wherein the pump is one of a water pump in a car and a mineral pump.

An example system for estimating a drill performance parameter for a drilling machine, includes: a data acquisition circuit structured to interpret a plurality of detection values from a plurality of input sensors communicatively coupled to the data acquisition circuit, each of the plurality of detection values corresponding to at least one of the input sensors; a data storage circuit structured to store specifications, system geometry, and anticipated state information for the drill and drill components associated with the detection values, store historical drill performance and buffer the plurality of detection values for a predetermined length of time; a timer circuit structured to generate a timing signal based on a first detected value of the plurality of detection values; a drill analysis circuit structured to analyze buffered detection values relative to specifications and anticipated state information resulting in a drill performance parameter comprising: a phase detection circuit structured to determine a relative phase difference between a second detection value of the plurality of detection values and the timing signal; and a signal evaluation circuit structured to obtain at least one of vibration amplitude, vibration frequency and vibration phase location corresponding to a second detected value and analyze the at least one of vibration amplitude, vibration frequency and vibration phase location relative to buffered detection values, specifications and anticipated state information resulting in a drill performance parameter; and a response circuit structured to perform at least one operation in response to at the at least one of vibration amplitude, vibration frequency and vibration phase location and the drill performance parameter, wherein the drilling machine is one of an oil drilling machine and a gas drilling machine.

An example system for estimating a conveyor health parameter, includes: a data acquisition circuit structured to interpret a plurality of detection values from a plurality of input sensors communicatively coupled to the data acquisition circuit, each of the plurality of detection values corresponding to at least one of the input sensors; a data storage circuit structured to store specifications, system geometry, and anticipated state information for a conveyor and conveyor components associated with the detection values, store historical conveyor performance and buffer the plurality of detection values for a predetermined length of time; a timer circuit structured to generate a timing signal based on a first detected value of the plurality of detection values; a conveyor analysis circuit structured to analyze buffered detection values relative to specifications and anticipated state information resulting in a conveyor performance parameter comprising: a phase detection circuit structured to determine a relative phase difference between a second detection value of the plurality of detection values and the timing signal; and a signal evaluation circuit structured to obtain at least one of vibration amplitude, vibration frequency and vibration phase location corresponding to a second detected value and analyze the at least one of vibration amplitude, vibration frequency and vibration phase location relative to buffered detection values, specifications and anticipated state information resulting in a conveyor performance parameter; and a response circuit structured to perform at least one operation in response to at the at least one of vibration amplitude, vibration frequency and vibration phase location and the conveyor performance parameter.

An example system for estimating an agitator health parameter, includes: a data acquisition circuit structured to interpret a plurality of detection values from a plurality of input sensors communicatively coupled to the data acquisition circuit, each of the plurality of detection values corresponding to at least one of the input sensors; a data storage circuit structured to store specifications, system geometry, and anticipated state information for an agitator and agitator components associated with the detection values, store historical agitator performance and buffer the plurality of detection values for a predetermined length of time; a timer circuit structured to generate a timing signal based on a first detected value of the plurality of detection values; an agitator analysis circuit structured to analyze buffered detection values relative to specifications and anticipated state information resulting in an agitator performance parameter comprising: a phase detection circuit structured to determine a relative phase difference between a second detection value of the plurality of detection values and the timing signal; and a signal evaluation circuit structured to obtain at least one of vibration amplitude, vibration frequency and vibration phase location corresponding to a second detected value and analyze the at least one of vibration amplitude, vibration frequency and vibration phase location relative to buffered detection values, specifications and anticipated state information resulting in an agitator performance parameter; and a response circuit structured to perform at least one operation in response to at the at least one of vibration amplitude, vibration frequency and vibration phase location and the agitator performance parameter, wherein the agitator is one of a rotating tank mixer, a large tank mixer, a portable tank mixers, a tote tank mixer, a drum mixer, a mounted mixer and a propeller mixer.

An example system for estimating a compressor health parameter, includes: a data acquisition circuit structured to interpret a plurality of detection values from a plurality of input sensors communicatively coupled to the data acquisition circuit, each of the plurality of detection values corresponding to at least one of the input sensors; a data storage circuit structured to store specifications, system geometry, and anticipated state information for a compressor and compressor components associated with the detection values, store historical compressor performance and buffer the plurality of detection values for a predetermined length of time; a timer circuit structured to generate a timing signal based on a first detected value of the plurality of detection values; a compressor analysis circuit structured to analyze buffered detection values relative to specifications and anticipated state information resulting in a compressor performance parameter comprising: a phase detection circuit structured to determine a relative phase difference between a second detection value of the plurality of detection values and the timing signal; and a signal evaluation circuit structured to obtain at least one of vibration amplitude, vibration frequency and vibration phase location corresponding to a second detected value and analyze the at least one of vibration amplitude, vibration frequency and vibration phase location relative to buffered detection values, specifications and anticipated state information resulting in a compressor performance parameter; and a response circuit structured to perform at least one operation in response to at the at least one of vibration amplitude, vibration frequency and vibration phase location and the compressor performance parameter.

An example system for estimating an air conditioner health parameter, includes: a data acquisition circuit structured to interpret a plurality of detection values from a plurality of input sensors communicatively coupled to the data acquisition circuit, each of the plurality of detection values corresponding to at least one of the input sensors; a data storage circuit structured to store specifications, system geometry, and anticipated state information for an air conditioner and air conditioner components associated with the detection values, store historical air conditioner performance and buffer the plurality of detection values for a predetermined length of time; a timer circuit structured to generate a timing signal based on a first detected value of the plurality of detection values; an air conditioner analysis circuit structured to analyze buffered detection values relative to specifications and anticipated state information resulting in an air conditioner performance parameter comprising: a phase detection circuit structured to determine a relative phase difference between a second detection value of the plurality of detection values and the timing signal; and a signal evaluation circuit structured to obtain at least one of vibration amplitude, vibration frequency and vibration phase location corresponding to a second detected value and analyze the at least one of vibration amplitude, vibration frequency and vibration phase location relative to buffered detection values, specifications and anticipated state information resulting in an air conditioner performance parameter; and a response circuit structured to perform at least one operation in response to at the at least one of vibration amplitude, vibration frequency and vibration phase location and the air conditioner performance parameter.

An example system for estimating a centrifuge health parameter, includes: a data acquisition circuit structured to interpret a plurality of detection values from a plurality of input sensors communicatively coupled to the data acquisition circuit, each of the plurality of detection values corresponding to at least one of the input sensors; a data storage circuit structured to store specifications, system geometry, and anticipated state information for a centrifuge and centrifuge components associated with the detection values, store historical centrifuge performance and buffer the plurality of detection values for a predetermined length of time; a timer circuit structured to generate a timing signal based on a first detected value of the plurality of detection values; a centrifuge analysis circuit structured to analyze buffered detection values relative to specifications and anticipated state information resulting in a centrifuge performance parameter comprising: a phase detection circuit structured to determine a relative phase difference between a second detection value of the plurality of detection values and the timing signal; and a signal evaluation circuit structured to obtain at least one of vibration amplitude, vibration frequency and vibration phase location corresponding to a second detected value and analyze the at least one of vibration amplitude, vibration frequency and vibration phase location relative to buffered detection values, specifications and anticipated state information resulting in a centrifuge performance parameter; and a response circuit structured to perform at least one operation in response to at the at least one of vibration amplitude, vibration frequency and vibration phase location and the centrifuge performance parameter.

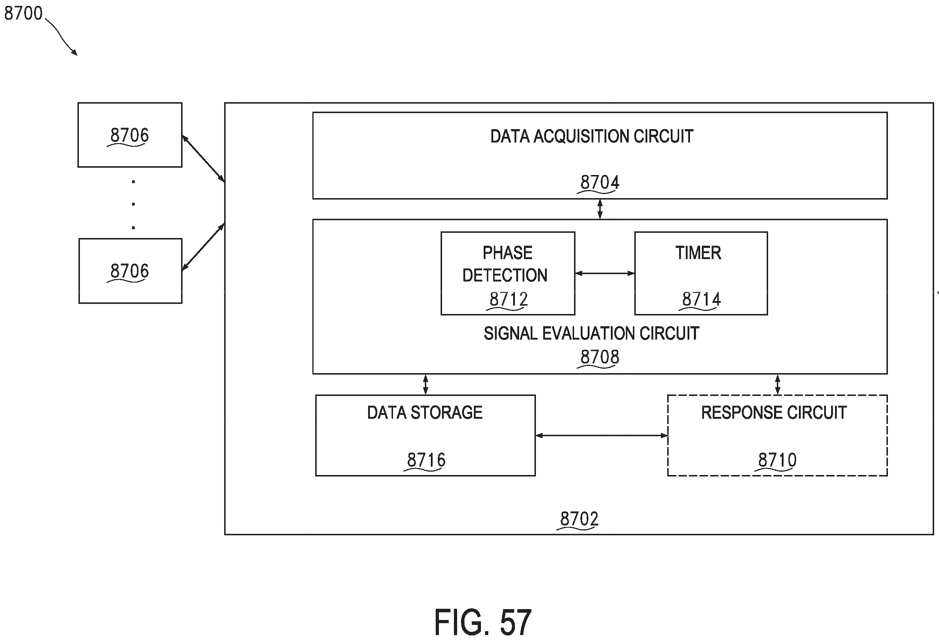

In embodiments, information about the health of a component or piece of industrial equipment may be obtained by comparing the values of multiple signals at the same point in a process. This may be accomplished by aligning a signal relative to other related data signals, timers, or reference signals. An embodiment of a data monitoring device 8700, 8718 is shown in Figures 57-59 and may include a controller 8702, 8720. The controller may include a data acquisition circuit 8704, 8722, a signal evaluation circuit 8708, a data storage circuit 8716 and an optional response circuit 8710. The signal evaluation circuit 8708 may comprise a timer circuit 8714 and, optionally, a phase detection circuit 8712.

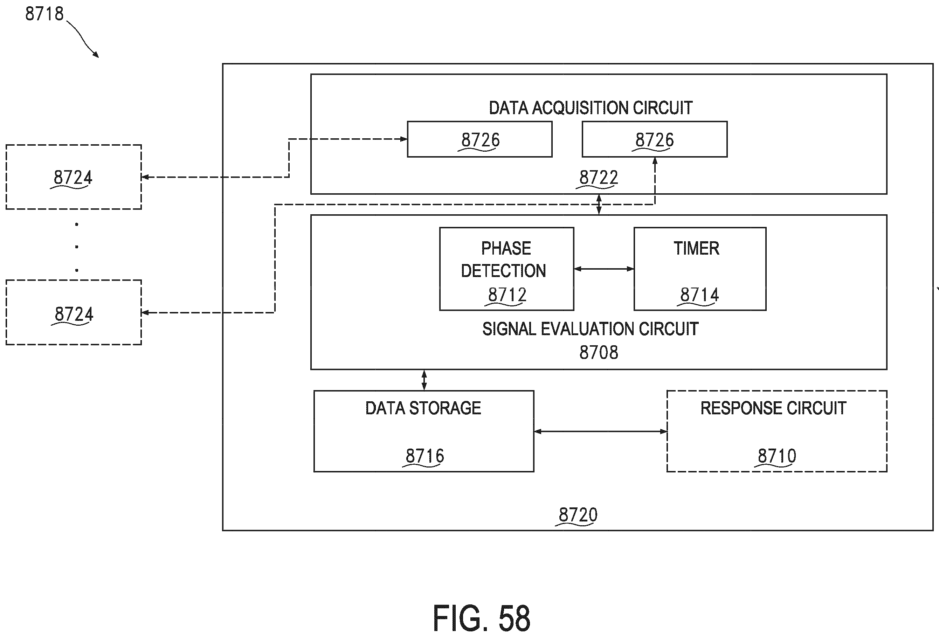

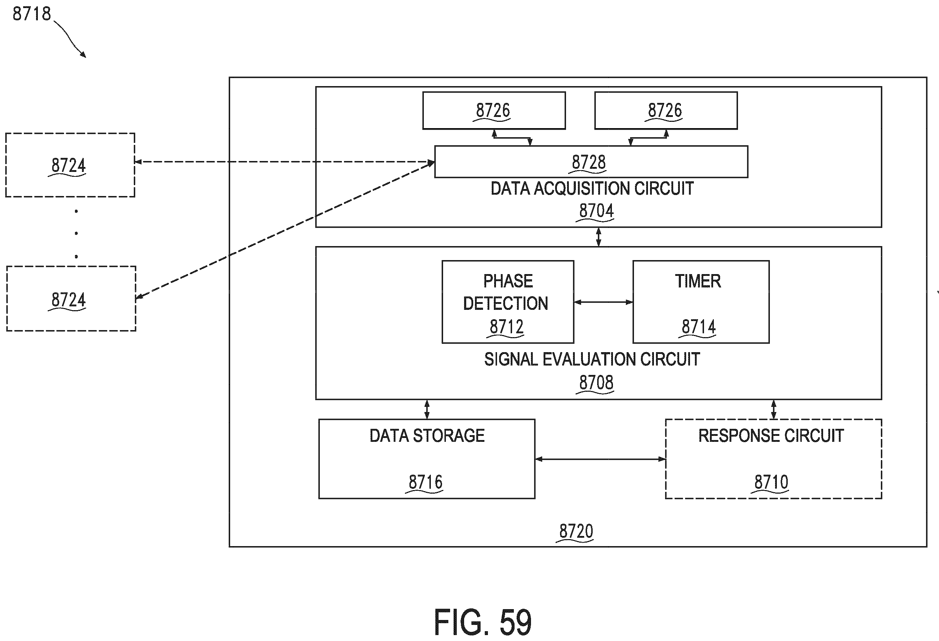

The data monitoring device may include a plurality of sensors 8706 communicatively coupled to a controller 8702. The plurality of sensors 8706 may be wired to ports on the data acquisition circuit 8704. The plurality of sensors 8706 may be wirelessly connected to the data acquisition circuit 8704 which may be able to access detection values corresponding to the output of at least one of the plurality of sensors 8706 where the sensors 8706 may be capturing data on different operational aspects of a piece of equipment or an operating component. In embodiments, as illustrated in Figures 58 and 59, one or more external sensors 8724 which are not explicitly part of a monitoring device 8718 may be opportunistically connected to or accessed by the monitoring device 8718. The data acquisition circuit 8722 may include one or more input ports 8726. The one or more external sensors 8724 may be directly connected to the one or more input ports 8726 on the data acquisition circuit 8722 of the controller 8720. In embodiments, as shown in Figure 59, a data acquisition circuit 8722 may further comprise a wireless communications circuit 8728 to access detection values corresponding to the one or more external sensors 8724 wirelessly or via a separate source or some combination of these methods.

The selection of the plurality of sensors 8706 8724 for connection to a data monitoring device 8700 8718 designed for a specific component or piece of equipment may depend on a variety of considerations such as accessibility for installing new sensors, incorporation of sensors in the initial design, anticipated operational and failure conditions, resolution desired at various positions in a process or plant, reliability of the sensors, and the like. The impact of a failure, time response of a failure (e.g., warning time and/or off-nominal modes occurring before failure), likelihood of failure, and/or sensitivity required and/or difficulty to detect failed conditions may drive the extent to which a component or piece of equipment is monitored with more sensors and/or higher capability sensors being dedicated to systems where unexpected or undetected failure would be costly or have severe consequences.

The signal evaluation circuit 8708 may process the detection values to obtain information about a component or piece of equipment being monitored. Information extracted by the signal evaluation circuit 8708 may comprise information regarding what point or time in a process corresponds with a detection value where the point in time is based on a timing signal generated by the timer circuit 8714. The start of the timing signal may be generated by detecting an edge of a control signal such as a rising edge, falling edge or both where the control signal may be associated with the start of a process. The start of the timing signal may be triggered by an initial movement of a component or piece of equipment. The start of the timing signal may be triggered by an initial flow through a pipe or opening or by a flow achieving a predetermined rate. The start of the timing signal may be triggered by a state value indicating a process has commenced - for example the state of a switch, button, data value provided to indicate the process has commenced, or the like. Information extracted may comprise information regarding a difference in phase, determined by the phase detection circuit 8712, between a stream of detection value and the time signal generated by the timer circuit 8714. Information extracted may comprise information regarding a difference in phase between one stream of detection values and a second stream of detection values where the first stream of detection values is used as a basis or trigger for a timing signal generated by the timer circuit.

Depending on the type of equipment, the component being measured, the environment in which the equipment is operating and the like, sensors 8706 8724 may comprise one or more of, without limitation, a thermometer, a hygrometer, a voltage sensor, a current sensor, an accelerometer, a velocity detector, a light or electromagnetic sensor (e.g., determining temperature, composition and/or spectral analysis, and/or object position or movement), an image sensor, a displacement sensor, a turbidity meter, a viscosity meter, a load sensor, a tri-axial sensor, a tachometer, a fluid pressure meter, an air flow meter, a horsepower meter, a flow rate meter, a fluid particle detector, an acoustical sensor, a pH sensor, and the like.

The sensors 8706 8724 may provide a stream of data over time that has a phase component, such as acceleration or vibration, allowing for the evaluation of phase or frequency analysis of different operational aspects of a piece of equipment or an operating component. The sensors 8706 8724 may provide a stream of data that is not phase based such as temperature, humidity, load, and the like. The sensors 8706 8724 may provide a continuous or near continuous stream of data over time, periodic readings, event-driven readings, and/or readings according to a selected interval or schedule.

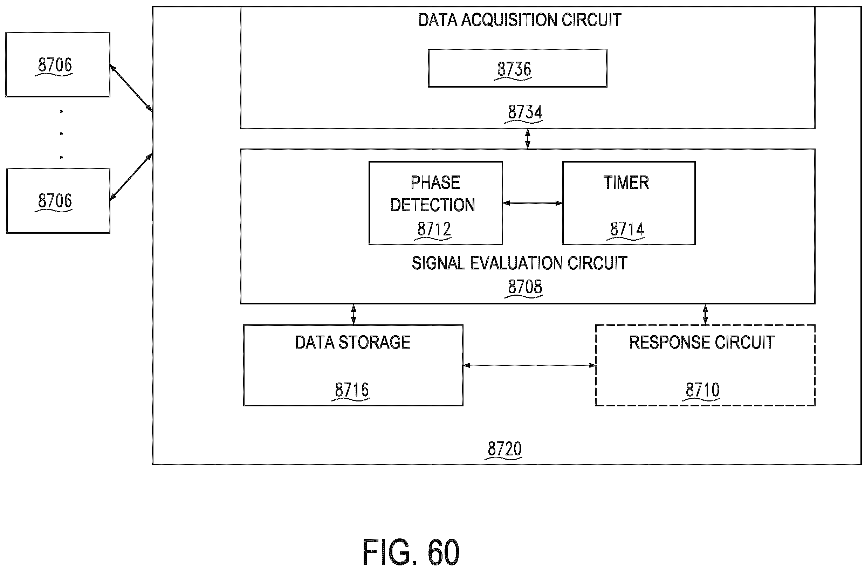

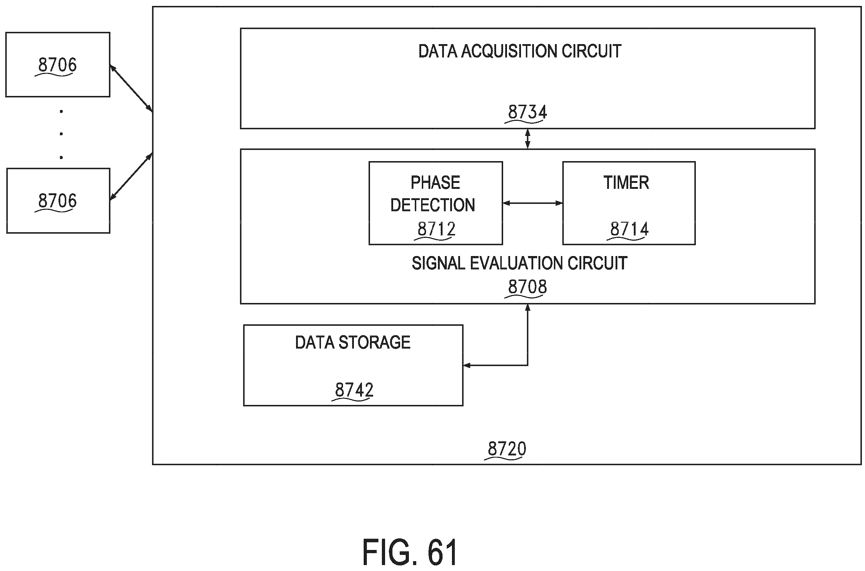

In embodiments, as illustrated in Figures 60 and 61, the data acquisition circuit 8734 may further comprise a multiplexer circuit 8736 as described elsewhere herein. Outputs from the multiplexer circuit 8736 may be utilized by the signal evaluation circuit 8708. The response circuit 8710 may have the ability to turn on and off portions of the multiplexer circuit 8736. The response circuit 8710 may have the ability to control the control channels of the multiplexer circuit 8736

The response circuit 8710 may further comprise evaluating the results of the signal evaluation circuit 8708 and, based on certain criteria, initiating an action. The criteria may include a sensor's detection values at certain frequencies or phases relative to the timer signal where the frequencies or phases of interest may be based on the equipment geometry, equipment control schemes, system input, historical data, current operating conditions, and/or an anticipated response. Criteria may include a predetermined maximum or minimum value for a detection value from a specific sensor, a cumulative value of a sensor's corresponding detection value over time, a change in value, a rate of change in value, and/or an accumulated value (e.g., a time spent above/below a threshold value, a weighted time spent above/below one or more threshold values, and/or an area of the detected value above/below one or more threshold values). The criteria may comprise combinations of data from different sensors such as relative values, relative changes in value, relative rates of change in value, relative values over time, and the like. The relative criteria may change with other data or information such as process stage, type of product being processed, type of equipment, ambient temperature and humidity, external vibrations from other equipment, and the like.

Certain embodiments are described herein as detected values exceeding thresholds or predetermined values, but detected values may also fall below thresholds or predetermined values - for example where an amount of change in the detected value is expected to occur, but detected values indicate that the change may not have occurred. For example, and without limitation, vibrational data may indicate system agitation levels, properly operating equipment, or the like, and vibrational data below amplitude and/or frequency thresholds may be an indication of a process that is not operating according to expectations. Except where the context clearly indicates otherwise, any description herein describing a determination of a value above a threshold and/or exceeding a predetermined or expected value is understood to include determination of a value below a threshold and/or falling below a predetermined or expected value.

The predetermined acceptable range may be based on anticipated system response or vibration based on the equipment geometry and control scheme such as number of bearings, relative rotational speed, influx of power to the system at a certain frequency, and the like. The predetermined acceptable range may also be based on long term analysis of detection values across a plurality of similar equipment and components and correlation of data with equipment failure.

In some embodiments, an alert may be issued based on the some of the criteria discussed above. In an illustrative example, an increase in temperature and energy at certain frequencies may indicate a hot bearing that is starting to fail. In embodiments, the relative criteria for an alarm may change with other data or information such as process stage, type of product being processed on equipment, ambient temperature and humidity, external vibrations from other equipment and the like. In an illustrative and non-limiting example, the response circuit 8710 may initiate an alert if a vibrational amplitude and/or frequency exceeds a predetermined maximum value, if there is a change or rate of change that exceeds a predetermined acceptable range, and/or if an accumulated value based on vibrational amplitude and/or frequency exceeds a threshold.

In embodiments, response circuit 8710 may cause the data acquisition circuit 8704 to enable or disable the processing of detection values corresponding to certain sensors based on the some of the criteria discussed above. This may include switching to sensors having different response rates, sensitivity, ranges, and the like; accessing new sensors or types of sensors, and the like. This switching may be implemented by changing the control signals for a multiplexer circuit 8736 and/or by turning on or off certain input sections of the multiplexer circuit 8736. The response circuit 8710 may make recommendations for the replacement of certain sensors in the future with sensors having different response rates, sensitivity, ranges, and the like. The response circuit 8710 may recommend design alterations for future embodiments of the component, the piece of equipment, the operating conditions, the process, and the like.

In embodiments, the response circuit 8710 may recommend maintenance at an upcoming process stop or initiate a maintenance call. The response circuit 8710 may recommend changes in process or operating parameters to remotely balance the piece of equipment. In embodiments, the response circuit 8710 may implement or recommend process changes - for example to lower the utilization of a component that is near a maintenance interval, operating off-nominally, or failed for purpose but still at least partially operational. In an illustrative example, vibration phase information, derived by the phase detection circuit 8712 relative to a timer signal from the timer circuit 8714, may be indicative of a physical location of a problem. Based on the vibration phase information, system design flaws, off-nominal operation, and/or component or process failures may be identified.

In embodiments, based on relevant operating conditions and/or failure modes which may occur in as sensor values approach one or more criteria, the signal evaluation circuit 8708 may store data in the data storage circuit 8716 based on the fit of data relative to one or more criteria. Based on one sensor input meeting or approaching specified criteria or range, the signal evaluation circuit 8708 may store additional data such as RPMs, component loads, temperatures, pressures, vibrations in the data storage circuit 8716. The signal evaluation circuit 8708 may store data at a higher data rate for greater granularity in future processing, the ability to reprocess at different sampling rates, and/or to enable diagnosing or post-processing of system information where operational data of interest is flagged, and the like.

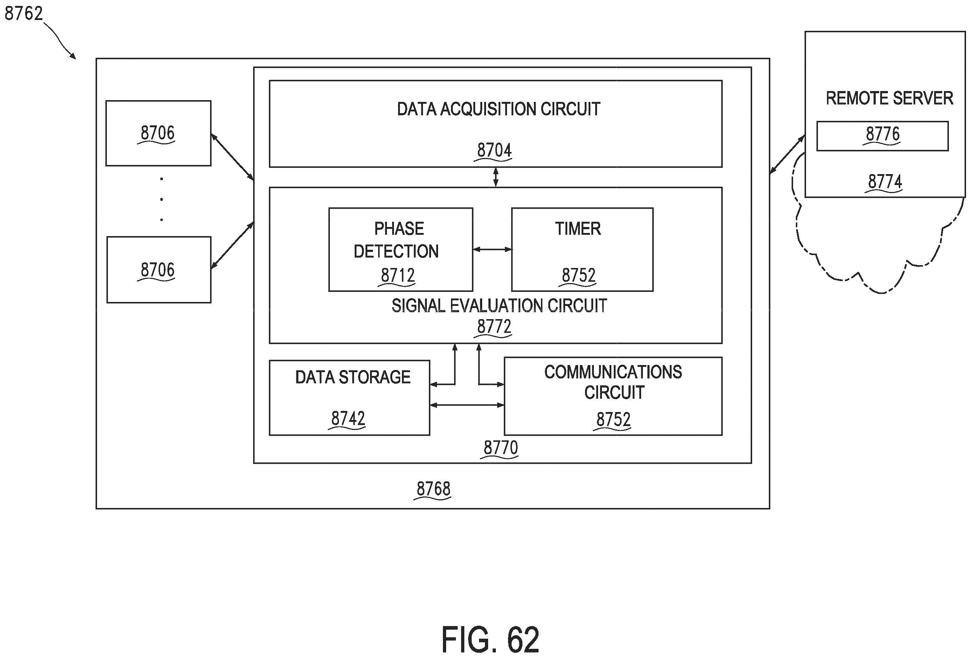

In embodiments, as shown in Figures 62 and 63 and 64 and 65, a data monitoring system 8762 may include at least one data monitoring device 8768. The at least one data monitoring device 8768 may include sensors 8706 and a controller 8770 comprising a data acquisition circuit 8704, a signal evaluation circuit 8772, a data storage circuit 8742, and a communications circuit 8752 to allow data and analysis to be transmitted to a monitoring application 8776 on a remote server 8774. The signal evaluation circuit 8772 may include at least one of a phase detection circuit 8712 and a timer circuit 8714. The signal evaluation circuit 8772 may periodically share data with the communication circuit 8752 for transmittal to the remote server 8774 to enable the tracking of component and equipment performance over time and under varying conditions by a monitoring application 8776. Because relevant operating conditions and/or failure modes may occur as sensor values approach one or more criteria, the signal evaluation circuit 8708 may share data with the communication circuit 8752 for transmittal to the remote server 8774 based on the fit of data relative to one or more criteria. Based on one sensor input meeting or approaching specified criteria or range, the signal evaluation circuit 8708 may share additional data such as RPMs, component loads, temperatures, pressures, vibrations, and the like for transmittal. The signal evaluation circuit 8772 may share data at a higher data rate for transmittal to enable greater granularity in processing on the remote server.

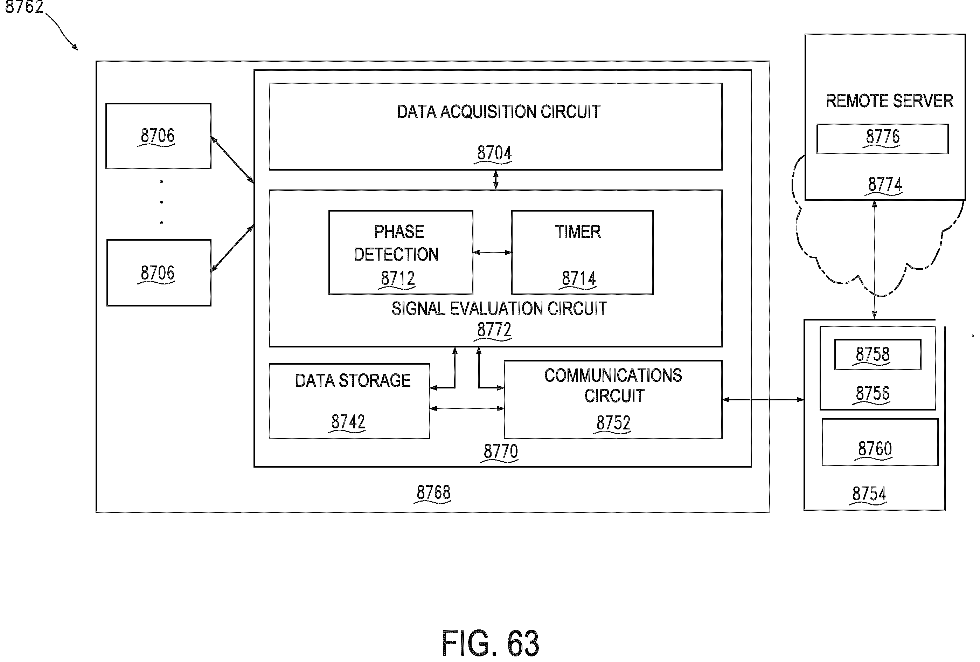

In embodiments, as shown in Figure 62, the communications circuit 8752 may communicated data directly to a remote server 8774. In embodiments, as shown in Figure 63, the communications circuit 8752 may communicate data to an intermediate computer 8754 which may include a processor 8756 running an operating system 8758 and a data storage circuit 8760. The intermediate computer 8754 may collect data from a plurality of data monitoring devices and send the cumulative data to the remote server 8774.

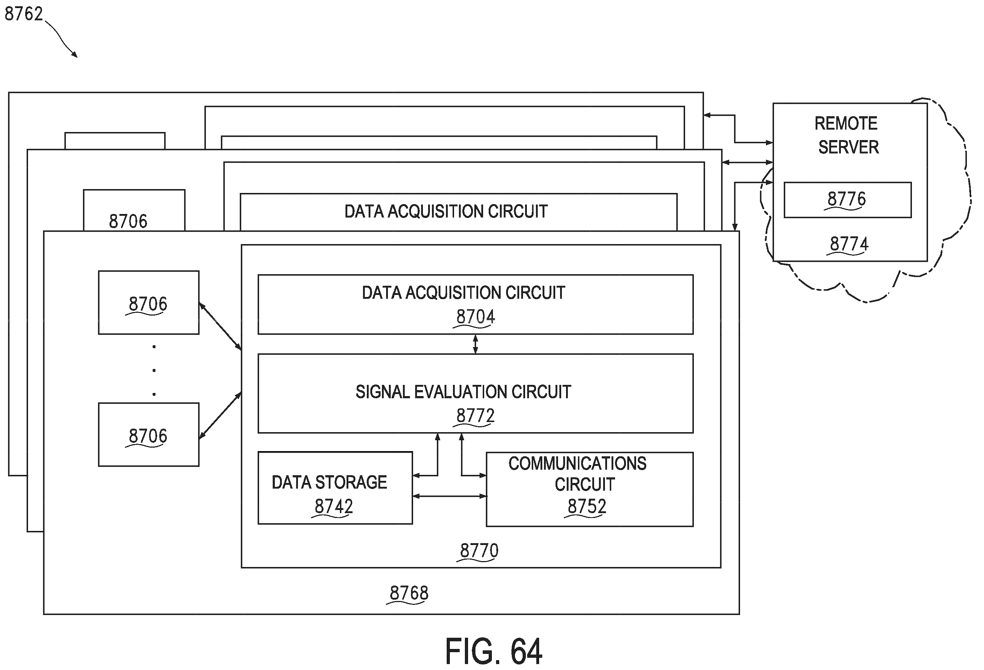

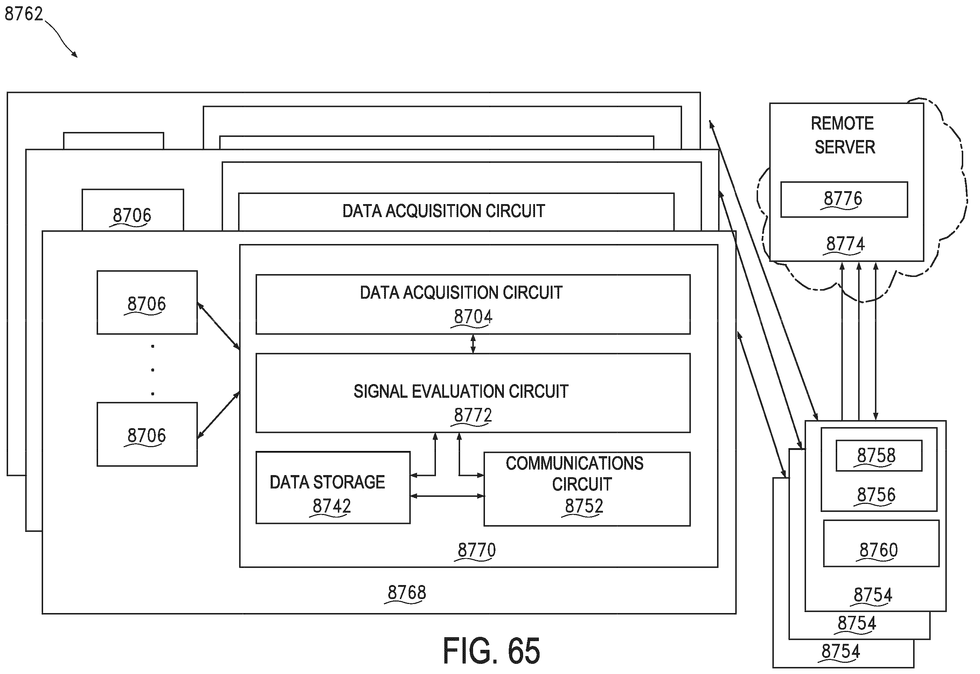

In embodiments as illustrated in Figures 64 and 65, a data collection system 8762 may have a plurality of monitoring devices 8768 collecting data on multiple components in a single piece of equipment, collecting data on the same component across a plurality of pieces of equipment, (both the same and different types of equipment) in the same facility as well as collecting data from monitoring devices in multiple facilities. In embodiments, as show in in Figure 64 the communications circuit 8752 may communicated data directly to a remote server 8774. In embodiments, as shown in Figure 65, the communications circuit 8752 may communicate data to an intermediate computer 8754 which may include a processor 8756 running an operating system 8758 and a data storage circuit 8760. The intermediate computer 8754 may collect data from a plurality of data monitoring devices and send the cumulative data to the remote server 8774.

In embodiments, a monitoring application 8776 on a remote server 8774 may receive and store one or more of detection values, timing signals and data coming from a plurality of the various monitoring devices 8768. The monitoring application 8776 may then select subsets of the detection values, timing signals and data to be jointly analyzed. Subsets for analysis may be selected based on a single type of component or a single type of equipment in which a component is operating. Subsets for analysis may be selected or grouped based on common operating conditions such as size of load, operational condition (e.g., intermittent, continuous, process stage), operating speed or tachometer, common ambient environmental conditions such as humidity, temperature, air or fluid particulate, and the like. Subsets for analysis may be selected based on the effects of other nearby equipment such as nearby machines rotating at similar frequencies.

The monitoring application 8776 may then analyze the selected subset. In an illustrative example, data from a single component may be analyzed over different time periods such as one operating cycle, several operating cycles, a month, a year, the life of the component or the like. Data from multiple components of the same type may also be analyzed over different time periods. Trends in the data such as changes in frequency or amplitude may be correlated with failure and maintenance records associated with the same or a related component or piece of equipment. Trends in the data such as changing rates of change associated with start-up or different points in the process may be identified. Additional data may be introduced into the analysis such as output product quality, indicated success or failure of a process, and the like. Correlation of trends and values for different types of data may be analyzed to identify those parameters whose short-term analysis might provide the best prediction regarding expected performance. This information may be transmitted back to the monitoring device to update types of data collected and analyzed locally or to influence the design of future monitoring devices.

In an illustrative and non-limiting example, a monitoring device 8768 may be used to collect and process sensor data to measure mechanical torque. The monitoring device 8768 may be in communication with or include a high resolution, high speed vibration sensor to collect data over a period of time sufficient to measure multiple cycles of rotation. For gear driven components, the sampling resolution of the sensor should be such that the number of samples taken per cycle is at least equal to the number of gear teeth driving the component. It will be understood that a lower sampling resolution may also be utilized, which may result in a lower confidence determination and/or taking data over a longer period of time to develop sufficient statistical confidence. This data may then be used in the generation of a phase reference (relative probe) or tachometer signal for a piece of equipment. This phase reference may be used directly or used by the timer circuit 8714 to generate a timing signal to align phase data such as vibrational data or acceleration data from multiple sensors located at different positions on a component or on different components within a system. This information may facilitate the determination of torque for different components or the generation of an Operational Deflection Shape (ODS).

A higher resolution data stream may also provide additional data for the detection of transitory signals in low speed operations. The identification of transitory signals may enable the identification of defects in a piece of equipment or component operating a low RPMs.

In an illustrative and non-limiting example, the monitoring device may be used to identify mechanical jitter for use in failure prediction models. The monitoring device may begin acquiring data when the piece of equipment starts up, through ramping up to operating speed, and then during operation. Once at operating speed, it is anticipated that the torsional jitter should be minimal or within expected ranges, and changes in torsion during this phase may be indicative of cracks, bearing faults, and the like. Additionally, known torsions may be removed from the signal to facilitate in the identification of unanticipated torsions resulting from system design flaws, component wear, or unexpected process events. Having phase information associated with the data collected at operating speed may facilitate identification of a location of vibration and potential component wear, and/or may be further correlated to a type of failure for a component. Relative phase information for a plurality of sensors located throughout a machine may facilitate the evaluation of torsion as it is propagated through a piece of equipment.

In embodiments, the monitoring application 8776 may have access to equipment specifications, equipment geometry, component specifications, component materials, anticipated state information for plurality of component types, operational history, historical detection values, component life models, and the like for use in analyzing the selected subset using rule-based or model-based analysis. In embodiments, the monitoring application 8776 may feed a neural net with the selected subset to learn to recognize various operating state, health states (e.g., lifetime predictions) and fault states utilizing deep learning techniques. In embodiments, a hybrid of the two techniques (model-based learning and deep learning) may be used.

In an illustrative and non-limiting example, component health of: conveyors and lifters in an assembly line; water pumps on industrial vehicles; factory air conditioning units; drilling machines, screw drivers, compressors, pumps, gearboxes, vibrating conveyors, mixers and motors situated in the oil and gas fields; factory mineral pumps; centrifuges, and refining tanks situated in oil and gas refineries; and compressors in gas handling systems may be monitored using the phase detection and alignment techniques, data monitoring devices and data collection systems described herein.

In an illustrative and non-limiting example, the component health of equipment to promote chemical reactions deployed in chemical and pharmaceutical production lines (e.g. rotating tank/mixer agitators, mechanical/rotating agitators, and propeller agitators) may be evaluated using the phase detection and alignment techniques, data monitoring devices and data collection systems described herein.

In an illustrative and non-limiting example, the component health of vehicle steering mechanisms and/or vehicle engines may be evaluated using the phase detection and alignment techniques, data monitoring devices and data collection systems described herein.

An example monitoring system for data collection, includes a data acquisition circuit structured to interpret a plurality of detection values, each of the plurality of detection values corresponding to at least one of a plurality of input sensors communicatively coupled to the data acquisition circuit; a signal evaluation circuit comprising: a timer circuit structured to generate at least one timing signal; and a phase detection circuit structured to determine a relative phase difference between at least one of the plurality of detection values and at least one of the timing signals from the timer circuit; and a response circuit structured to perform at least one operation in response to the relative phase difference. In certain further embodiments, an example system includes: wherein the at least one operation is further in response to at least one of: a change in amplitude of at least one of the plurality of detection values; a change in frequency or relative phase of at least one of the plurality of detection values; a rate of change in both amplitude and relative phase of at least one the plurality of detection values; and a relative rate of change in amplitude and relative phase of at least one the plurality of detection values; wherein the at least one operation comprises issuing an alert; wherein the alert may be one of haptic, audible and visual; a data storage circuit, wherein the relative phase difference and at least one of the detection values and the timing signal are stored; wherein the at least one operation further comprises storing additional data in the data storage circuit; wherein the storing additional data in the data storage circuit is further in response to at least one of: a change in the relative phase difference and a relative rate of change in the relative phase difference; wherein the data acquisition circuit further comprises at least one multiplexer circuit (MUX) whereby alternative combinations of detection values may be selected based on at least one of user input and a selected operating parameter for a machine, wherein each of the plurality of detection values corresponds to at least one of the input sensors; wherein the at least one operation comprises enabling or disabling one or more portions of the multiplexer circuit, or altering the multiplexer control lines; wherein the data acquisition circuit comprises at least two multiplexer circuits and the at least one operation comprises changing connections between the at least two multiplexer circuits; and/or the system further comprising a MUX control circuit structured to interpret a subset of the plurality of detection values and provide the logical control of the MUX and the correspondence of MUX input and detected values as a result, wherein the logic control of the MUX comprises adaptive scheduling of the select lines.

An example system for data collection, includes: a data acquisition circuit structured to interpret a plurality of detection values, each of the plurality of detection values corresponding to at least one of a plurality of input sensors communicatively coupled to the data acquisition circuit; a signal evaluation circuit comprising: a timer circuit structured to generate a timing signal based on a first detected value of the plurality of detection values; and a phase detection circuit structured to determine a relative phase difference between a second detection value of the plurality of detection values and the timing signal; and a phase response circuit structured to perform at least one operation in response to the phase difference. In certain further embodiments, an example system includes wherein the at least one operation is further in response to at least one of: a change in amplitude of at least one of the plurality of detection values; a change in frequency or relative phase of at least one of the plurality of detection values; a rate of change in both amplitude and relative phase of at least one the plurality of detection values and a relative rate of change in amplitude and relative phase of at least one the plurality of detection values; wherein the at least one operation comprises issuing an alert; wherein the alert may be one of haptic, audible and visual; where the system, further includes a data storage circuit; wherein the relative phase difference and at least one of the detection values and the timing signal are stored; wherein the at least one operation further includes storing additional data in the data storage circuit; wherein the storing additional data in the data storage circuit is further in response to at least one of: a change in the relative phase difference and a relative rate of change in the relative phase difference; wherein the data acquisition circuit further includes at least one multiplexer (MUX) circuit whereby alternative combinations of detection values may be selected based on at least one of user input and a selected operating parameter for a machine; wherein each of the plurality of detection values corresponds to at least one of the input sensors; wherein the at least one operation comprises enabling or disabling one or more portions of the multiplexer circuit, or altering the multiplexer control lines; wherein the data acquisition circuit comprises at least two multiplexer circuits and the at least one operation comprises changing connections between the at least two multiplexer circuits; where the system further comprising a MUX control circuit structured to interpret a subset of the plurality of detection values and provide the logical control of the MUX and the correspondence of MUX input and detected values as a result; and/or wherein the logic control of the MUX comprises adaptive scheduling of the select lines.

An example system for data collection, processing, and utilization of signals in an industrial environment includes a data acquisition circuit structured to interpret a plurality of detection values, each of the plurality of detection values corresponding to at least one of a plurality of input sensors communicatively coupled to the data acquisition circuit; a signal evaluation circuit comprising: a timer circuit structured to generate a timing signal based on a first detected value of the plurality of detection values; and a phase detection circuit structured to determine a relative phase difference between a second detection value of the plurality of detection values and the timing signal; a data storage facility for storing a subset of the plurality of detection values and the timing signal; a communication circuit structured to communicate at least one selected detection value and the timing signal to a remote server; and a monitoring application on the remote server structured to receive the at least one selected detection value and the timing signal; jointly analyze a subset of the detection values received from the plurality of monitoring devices; and recommend an action. In certain embodiments, the example system further includes wherein joint analysis comprises using the timing signal from each of the plurality of monitoring devices to align the detection values from the plurality of monitoring devices and/or wherein the subset of detection values is selected based on data associated with a detection value comprising at least one: common type of component, common type of equipment, and common operating conditions.

An example system for data collection in an industrial environment, includes: a data acquisition circuit structured to interpret a plurality of detection values, each of the plurality of detection values corresponding to at least one of a plurality of input sensors communicatively coupled to the data acquisition circuit, the data acquisition circuit comprising a multiplexer circuit whereby alternative combinations of the detection values may be selected based on at least one of user input, a detected state and a selected operating parameter for a machine, each of the plurality of detection values corresponding to at least one of the input sensors; a signal evaluation circuit comprising: a timer circuit structured to generate a timing signal; and a phase detection circuit structured to determine a relative phase difference between at least one of the plurality of detection values and a signal from the timer circuit; and a response circuit structured to perform at least one operation in response to the phase difference.

An example monitoring system for data collection in a piece of equipment, includes a data acquisition circuit structured to interpret a plurality of detection values, each of the plurality of detection values corresponding to at least one of a plurality of input sensors communicatively coupled to the data acquisition circuit; a timer circuit structured to generate a timing signal based on a first detected value of the plurality of detection values; a signal evaluation circuit structured to obtain at least one of vibration amplitude, vibration frequency and vibration phase location corresponding to a second detected value comprising: a phase detection circuit structured to determine a relative phase difference between a second detection value of the plurality of detection values and the timing signal; and a response circuit structured to perform at least one operation in response to at the at least one of the vibration amplitude, vibration frequency and vibration phase location.

A monitoring system for bearing analysis in an industrial environment, the monitoring device includes: a data acquisition circuit structured to interpret a plurality of detection values, each of the plurality of detection values corresponding to at least one of a plurality of input sensors communicatively coupled to the data acquisition circuit; a timer circuit structured to generate a timing signal a data storage for storing specifications and anticipated state information for a plurality of bearing types and buffering the plurality of detection values for a predetermined length of time; a timer circuit structured to generate a timing signal based on a first detected value of the plurality of detection values; a bearing analysis circuit structured to analyze buffered detection values relative to specifications and anticipated state information resulting in a life prediction comprising: a phase detection circuit structured to determine a relative phase difference between a second detection value of the plurality of detection values and the timing signal; a signal evaluation circuit structured to obtain at least one of vibration amplitude, vibration frequency and vibration phase location corresponding to a second detected value: and a response circuit structured to perform at least one operation in response to at the at least one of the vibration amplitude, vibration frequency and vibration phase location.

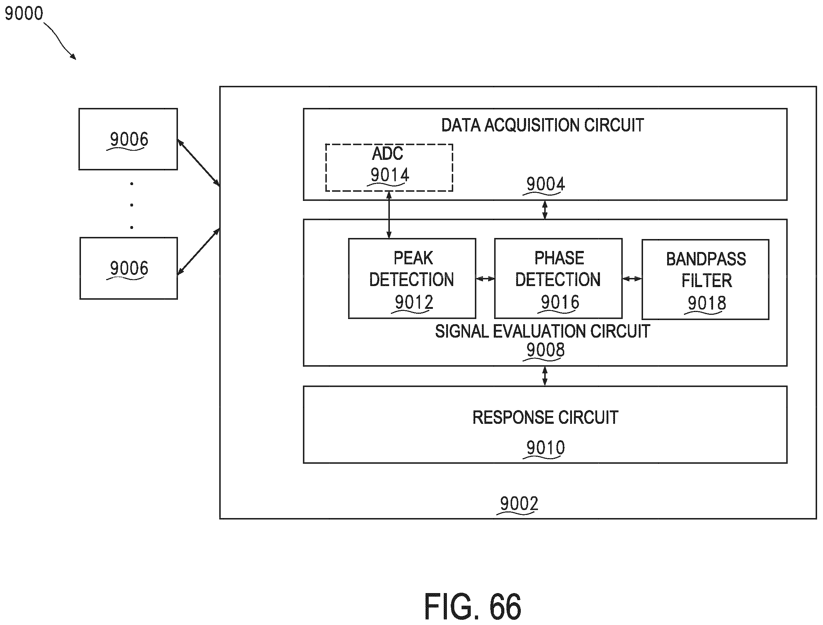

In embodiments, information about the health or other status or state information of or regarding a component or piece of industrial equipment may be obtained by monitoring the condition of various components throughout a process. Monitoring may include monitoring the amplitude of a sensor signal measuring attributes such as temperature, humidity, acceleration, displacement and the like. An embodiment of a data monitoring device 9000 is shown in Figure 66 and may include a plurality of sensors 9006 communicatively coupled to a controller 9002. The controller 9002, which may be part of a data collection device, such as a mobile data collector, or part of a system, such as a network-deployed or cloud-deployed system, may include a data acquisition circuit 9004, a signal evaluation circuit 9008 and a response circuit 9010. The signal evaluation circuit 9008 may comprise a peak detection circuit 9012. Additionally, the signal evaluation circuit 9008 may optionally comprise one or more of a phase detection circuit 9016, a bandpass filter circuit 9018, a phase lock loop circuit, a torsional analysis circuit, a bearing analysis circuit, and the like. The bandpass filter 9018 may be used to filter a stream of detection values such that values, such as peaks and valleys, are detected only at or within bands of interest, such as frequencies of interest. The data acquisition circuit 9004 may include one or more analog-to-digital converter circuits 9014. A peak amplitude detected by the peak detection circuit 9012 may be input into one or more analog-to-digital converter circuits 9014 to provide a reference value for scaling output of the analog-to-digital converter circuits 9014 appropriately.

The plurality of sensors 9006 may be wired to ports on the data acquisition circuit 9004. The plurality of sensors 9006 may be wirelessly connected to the data acquisition circuit 9004. The data acquisition circuit 9004 may be able to access detection values corresponding to the output of at least one of the plurality of sensors 9006 where the sensors 9006 may be capturing data on different operational aspects of a piece of equipment or an operating component.

The selection of the plurality of sensors 9006 for a data monitoring device 9000 designed for a specific component or piece of equipment may depend on a variety of considerations such as accessibility for installing new sensors, incorporation of sensors in the initial design, anticipated operational and failure conditions, resolution desired at various positions in a process or plant, reliability of the sensors, power availability, power utilization, storage utilization, and the like. The impact of a failure, time response of a failure (e.g., warning time and/or off-optimal modes occurring before failure), likelihood of failure, extent of impact of failure, and/or sensitivity required and/or difficulty to detection failure conditions may drive the extent to which a component or piece of equipment is monitored with more sensors and/or higher capability sensors being dedicated to systems where unexpected or undetected failure would be costly or have severe consequences.

The signal evaluation circuit 9008 may process the detection values to obtain information about a component or piece of equipment being monitored. Information extracted by the signal evaluation circuit 9008 may comprise information regarding a peak value of a signal such as a peak temperature, peak acceleration, peak velocity, peak pressure, peak weight bearing, peak strain, peak bending, or peak displacement. The peak detection may be done using analog or digital circuits. In embodiments, the peak detection circuit 9012 may be able to distinguish between "local" or short term peaks in a stream of detection values and a "global" or longer term peak. In embodiments, the peak detection circuit 9012 may be able to identify peak shapes (not just a single peak value) such as flat tops, asymptotic approaches, discrete jumps in the peak value or rapid/steep climbs in peak value, sinusoidal behavior within ranges and the like. Flat topped peaks may indicate saturation at of a sensor. Asymptotic approaches to a peak may indicate linear system behavior. Discrete jumps in value or steep changes in peak value may indicate quantized or nonlinear behavior of either the sensor doing the measurement or the behavior of the component. In embodiments, the system may be able to identify sinusoidal variations in the peak value within an envelope, such as an envelope established by line or curve connecting a series of peak values. It should be noted that references to "peaks" should be understood to encompass one or more "valleys," representing a series of low points in measurement, except where context indicates otherwise.

In embodiments, a peak value may be used as a reference for an analog-to-digital conversion circuit 9014.

In an illustrative and non-limiting example, a temperature probe may measure the temperature of a gear as it rotates in a machine. The peak temperature may be detected by a peak detection circuit 9012. The peak temperature may be fed into an analog-to-digital converter circuit 9014 to appropriately scale a stream of detection values corresponding to temperature readings of the gear as it rotates in a machine. The phase of the stream of detection values corresponding to temperature relative to an orientation of the gear may be determined by the phase detection circuit 9016. Knowing where in the rotation of the gear a peak temperature is occurring may allow the identification of a bad gear tooth.

In some embodiments, two or more sets of detection values may be fused to create detection values for a virtual sensor. A peak detection circuit may be used to verify consistency in timing of peak values between at least one of the two or more sets of detection values and the detection values for the virtual sensor.

In embodiments, the signal evaluation circuit 9008 may be able to reset the peak detection circuit 9012 upon start-up of the monitoring device 9000, upon edge detection of a control signal of the system being monitored, based on a user input, after a system error and the like. In embodiments, the signal evaluation circuit 9008 may discard an initial portion of the output of the peak detection circuit 9012 prior to using the peak value as a reference value for an analog-to-digital conversion circuit to allow the system to fully come on line.

Depending on the type of equipment, the component being measured, the environment in which the equipment is operating and the like, sensors 9006 may comprise one or more of, without limitation, a vibration sensor, a thermometer, a hygrometer, a voltage sensor, a current sensor, an accelerometer, a velocity detector, a light or electromagnetic sensor (e.g., determining temperature, composition and/or spectral analysis, and/or object position or movement), an image sensor, a structured light sensor, a laser-based image sensor, an acoustic wave sensor, a displacement sensor, a turbidity meter, a viscosity meter, a load sensor, a tri-axial sensor, an accelerometer, a tachometer, a fluid pressure meter, an air flow meter, a horsepower meter, a flow rate meter, a fluid particle detector, an acoustical sensor, a pH sensor, and the like, including, without limitation, any of the sensors described throughout this disclosure.

The sensors 9006 may provide a stream of data over time that has a phase component, such as relating to acceleration or vibration, allowing for the evaluation of phase or frequency analysis of different operational aspects of a piece of equipment or an operating component. The sensors 9006 may provide a stream of data that is not conventionally phase-based, such as temperature, humidity, load, and the like. The sensors 9006 may provide a continuous or near continuous stream of data over time, periodic readings, event-driven readings, and/or readings according to a selected interval or schedule.

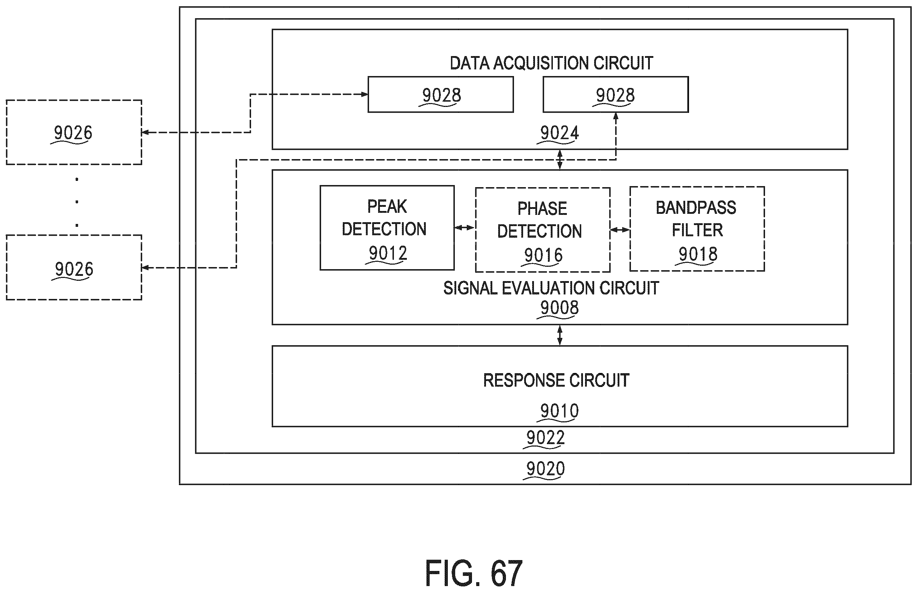

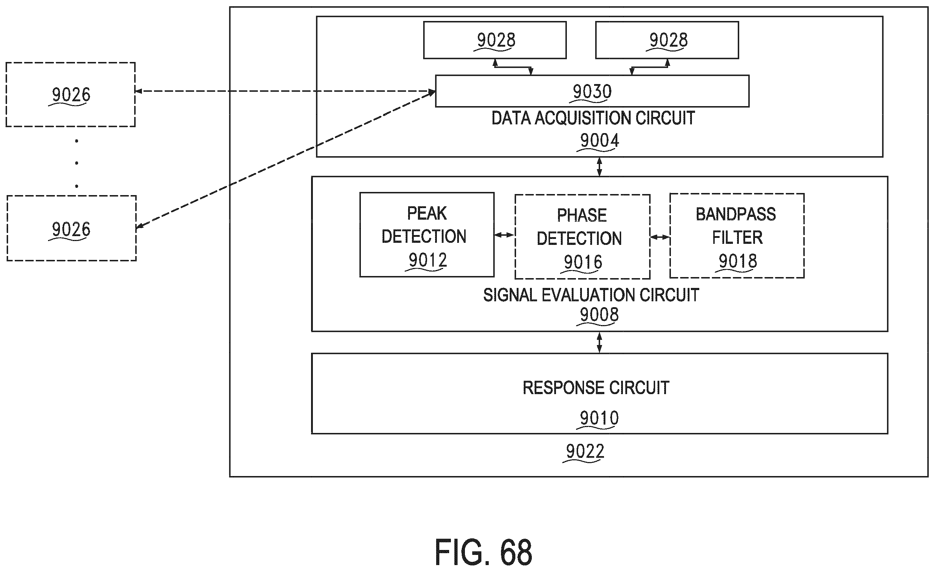

In embodiments, as illustrated in Figure 66, the sensors 9006 may be part of the data monitoring device 9000, referred to herein in some cases as a data collector, which in some cases may comprise a mobile or portable data collector. In embodiments, as illustrated in Figures 67 and 68, one or more external sensors 9026, which are not explicitly part of a monitoring device 9020 but rather are new, previously attached to or integrated into the equipment or component, may be opportunistically connected to or accessed by the monitoring device 9020. The monitoring device 9020 may include a controller 9022. The controller 9022 may include a response circuit 9010, a signal evaluation circuit 9008 and a data acquisition circuit 9024. The signal evaluation circuit 9008 may include a peak detection circuit 9012 and optionally a phase detection circuit 9016 and/or a bandpass filter circuit 9018. The data acquisition circuit 9024 may include one or more input ports 9028. The one or more external sensors 9026 may be directly connected to the one or more input ports 9028 on the data acquisition circuit 9024 of the controller 9022 or may be accessed by the data acquisition circuit 9004 wirelessly, such as by a reader, interrogator, or other wireless connection, such as over a short-distance wireless protocol. In embodiments as shown in Figure 68, a data acquisition circuit 9024 may further comprise a wireless communication circuit 9030. The data acquisition circuit 9024 may use the wireless communication circuit 9030 to access detection values corresponding to the one or more external sensors 9026 wirelessly or via a separate source or some combination of these methods.

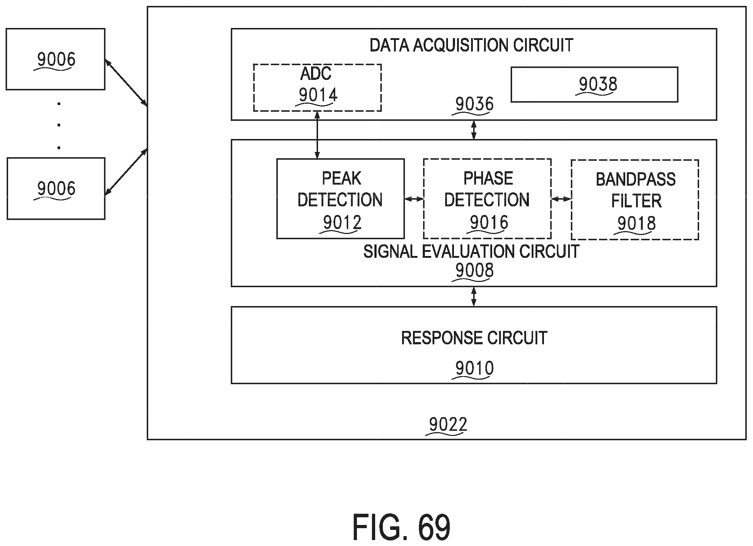

In embodiments as illustrated in Figure 69, the data acquisition circuit 9036 may further comprise a multiplexer circuit 9038 as described elsewhere herein. Outputs from the multiplexer circuit 9038 may be utilized by the signal evaluation circuit 9008. The response circuit 9010 may have the ability to turn on and off portions of the multiplexor circuit 9038. The response circuit 9010 may have the ability to control the control channels of the multiplexor circuit 9038

The response circuit 9010 may evaluate the results of the signal evaluation circuit 9008 and, based on certain criteria, initiate an action. The criteria may include a predetermined peak value for a detection value from a specific sensor, a cumulative value of a sensor's corresponding detection value over time, a change in peak value, a rate of change in a peak value, and/or an accumulated value (e.g., a time spent above/below a threshold value, a weighted time spent above/below one or more threshold values, and/or an area of the detected value above/below one or more threshold values). The criteria may comprise combinations of data from different sensors such as relative values, relative changes in value, relative rates of change in value, relative values over time, and the like. The relative criteria may change with other data or information such as process stage, type of product being processed, type of equipment, ambient temperature and humidity, external vibrations from other equipment, and the like. The relative criteria may be reflected in one or more calculated statistics or metrics (including ones generated by further calculations on multiple criteria or statistics), which in turn may be used for processing (such as an on-board a data collector or by an external system), such as to be provided as an input to one or more of the machine learning capabilities described in this disclosure, to a control system (which may be on-board a data collector or remote, such as to control selection of data inputs, multiplexing of sensor data, storage, or the like), or as a data element that is an input to another system, such as a data stream or data package that may be available to a data marketplace, a SCADA system, a remote control system, a maintenance system, an analytic system, or other system.

Certain embodiments are described herein as detected values exceeding thresholds or predetermined values, but detected values may also fall below thresholds or predetermined values - for example where an amount of change in the detected value is expected to occur, but detected values indicate that the change may not have occurred. For example, and without limitation, vibrational data may indicate system agitation levels, properly operating equipment, or the like, and vibrational data below amplitude and/or frequency thresholds may be an indication of a process that is not operating according to expectations. For example, in a process involving a blender, a mixer, an agitator or the like, the absence of vibration may indicate that a blade, fin, vane or other working element is unable to move adequately, such as, for example, as a result of a working material being excessively viscous or as a result of a problem in gears (e.g., stripped gears, seizing in gears, or the like (a clutch, or the like). Except where the context clearly indicates otherwise, any description herein describing a determination of a value above a threshold and/or exceeding a predetermined or expected value is understood to include determination of a value below a threshold and/or falling below a predetermined or expected value.

The predetermined acceptable range may be based on anticipated system response or vibration based on the equipment geometry and control scheme such as number of bearings, relative rotational speed, influx of power to the system at a certain frequency, and the like. The predetermined acceptable range may also be based on long term analysis of detection values across a plurality of similar equipment and components and correlation of data with equipment failure.

In embodiments, the response circuit 9010 may issue an alert based on one or more of the criteria discussed above. In an illustrative example, an increase in peak temperature beyond a predetermined value may indicate a hot bearing that is starting to fail. In embodiments, the relative criteria for an alarm may change with other data or information such as process stage, type of product being processed on equipment, ambient temperature and humidity, external vibrations from other equipment and the like. In an illustrative and non-limiting example, the response circuit 9010 may initiate an alert if an amplitude, such as a vibrational amplitude and/or frequency, exceeds a predetermined maximum value, if there is a change or rate of change that exceeds a predetermined acceptable range, and/or if an accumulated value based on such amplitude and/or frequency exceeds a threshold.

In embodiments, the response circuit 9010 may cause the data acquisition circuit 9004 to enable or disable the processing of detection values corresponding to certain sensors based on one or more of the criteria discussed above. This may include switching to sensors having different response rates, sensitivity, ranges, and the like; accessing new sensors or types of sensors, accessing data from multiple sensors, and the like. Switching may be based on a detected peak value for the sensor being switched or based on the peak value of another sensor. Switching may be undertaken based on a model, a set of rules, or the like. In embodiments, switching may be under control of a machine learning system, such that switching is controlled based on one or more metrics of success, combined with input data, over a set of trials, which may occur under supervision of a human supervisor or under control of an automated system. Switching may involve switching from one input port to another (such as to switch from one sensor to another). Switching may involve altering the multiplexing of data, such as combining different streams under different circumstances. Switching may involve activating a system to obtain additional data, such as moving a mobile system (such as a robotic or drone system), to a location where different or additional data is available (such as positioning an image sensor for a different view or positioning a sonar sensor for a different direction of collection) or to a location where different sensors can be accessed (such as moving a collector to connect up to a sensor that is disposed at a location in an environment by a wired or wireless connection). This switching may be implemented by changing the control signals for a multiplexor circuit 9038 and/or by turning on or off certain input sections of the multiplexor circuit 9038.

In embodiments, the response circuit 9010 may adjust a sensor scaling value using the detected peak as a reference voltage. The response circuit 9010 may adjust a sensor sampling rate such that the peak value is captured.

The response circuit 9010 may identify sensor overload. In embodiments, the response circuit 9010 may make recommendations for the replacement of certain sensors in the future with sensors having different response rates, sensitivity, ranges, and the like. The response circuit 9010 may recommend design alterations for future embodiments of the component, the piece of equipment, the operating conditions, the process, and the like.

In embodiments, the response circuit 9010 may recommend maintenance at an upcoming process stop or initiate a maintenance call where the maintenance may include the replacement of the sensor with the same or an alternate type of sensor having a different response rate, sensitivity, range and the like. In embodiments, the response circuit 9010 may implement or recommend process changes- for example, to lower the utilization of a component that is near a maintenance interval, operating off-nominally, or failed for purpose but still at least partially operational, to change the operating speed of a component (such as to put it in a lower-demand mode), to initiate amelioration of an issue (such as to signal for additional lubrication of a roller bearing set, or to signal for an alignment process for a system that is out of balance), and the like.

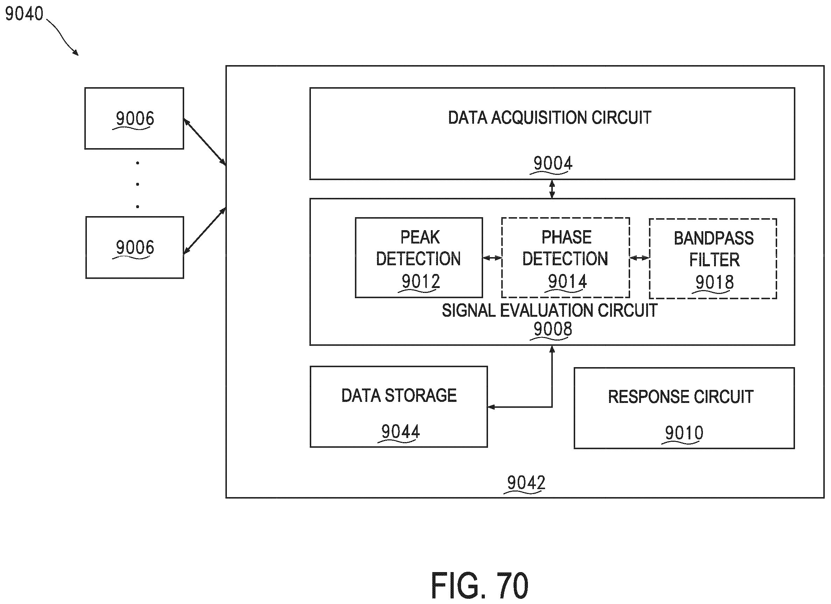

In embodiments, as shown in Figure 70, the data monitoring device 9040 may include sensors 9006 and a controller 9042 which may include a data acquisition circuit 9004, and a signal evaluation circuit 9008. The signal evaluation circuit 9008 may include a peak detection circuit 9012 and, optionally, a phased detection circuit 9016 and/or a bandpass filter circuit 9018. The controller 9042 may further include a data storage circuit 9044, memory, and the like. The controller 9042 may further include a response circuit 9010. The signal evaluation circuit 9008 may periodically store certain detection values in the data storage circuit 9044 to enable the tracking of component performance over time.

In embodiments, based on relevant criteria as described elsewhere herein, operating conditions and/or failure modes which may occur as sensor values approach one or more criteria, the signal evaluation circuit 9008 may store data in the data storage circuit 9044 based on the fit of data relative to one or more criteria, such as those described throughout this disclosure. Based on one sensor input meeting or approaching specified criteria or range, the signal evaluation circuit 9008 may store additional data such as RPMs, component loads, temperatures, pressures, vibrations or other sensor data of the types described throughout this disclosure in the data storage circuit 9068. The signal evaluation circuit 9008 may store data at a higher data rate for greater granularity in future processing, the ability to reprocess at different sampling rates, and/or to enable diagnosing or post-processing of system information where operational data of interest is flagged, and the like.

In embodiments, the signal evaluation circuit 9008 may store new peaks that indicate changes in overall scaling over a long duration (e.g., scaling a data stream based on historical peaks over months of analysis). The signal evaluation circuit 9008 may store data when historical peak values are approached (e.g., as temperatures, pressures, vibrations, velocities, accelerations and the like approach historical peaks).

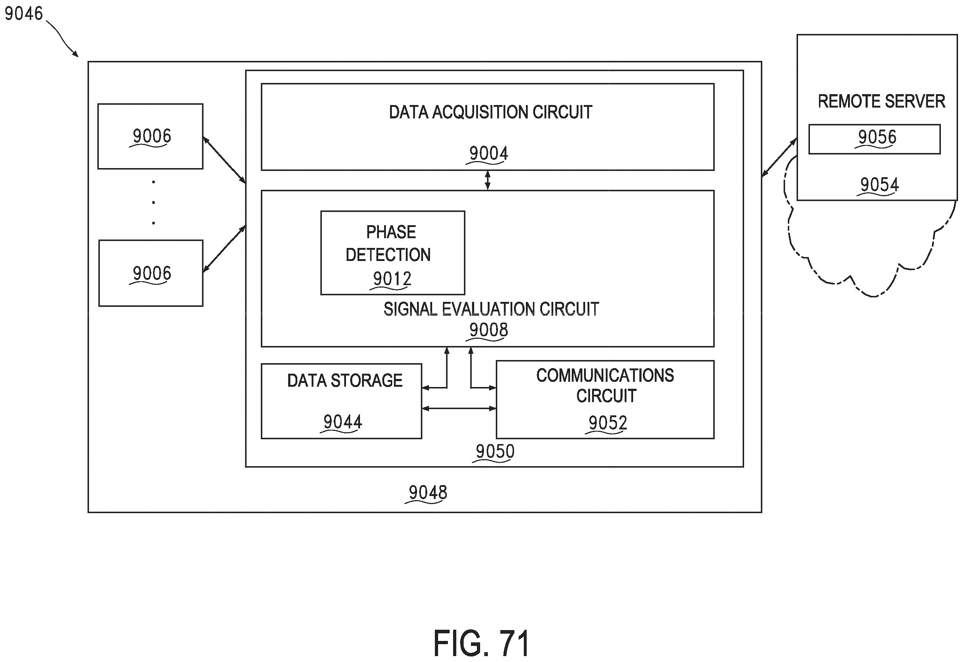

In embodiments as shown in Figures 71 and 72 and 73 and 74, a data monitoring system 9046 may include at least one data monitoring device 9048. At least one data monitoring device 9048 may include sensors 9006 and a controller 9050 comprising a data acquisition circuit 9004, a signal evaluation circuit 9008, a data storage circuit 9044, and a communication circuit 9052 to allow data and analysis to be transmitted to a monitoring application 9056 on a remote server 9054. The signal evaluation circuit 9008 may include at least one of a peak detection circuit 9012. The signal evaluation circuit 9008 may periodically share data with the communication circuit 9052 for transmittal to the remote server 9054 to enable the tracking of component and equipment performance over time and under varying conditions by a monitoring application 9056. Because relevant operating conditions and/or failure modes may occur as sensor values approach one or more criteria as described elsewhere herein, the signal evaluation circuit 9008 may share data with the communication circuit 9052 for transmittal to the remote server 9054 based on the fit of data relative to one or more criteria. Based on one sensor input meeting or approaching specified criteria or range, the signal evaluation circuit 9008 may share additional data such as RPMs, component loads, temperatures, pressures, vibrations, and the like for transmittal. The signal evaluation circuit 9008 may share data at a higher data rate for transmittal to enable greater granularity in processing on the remote server.

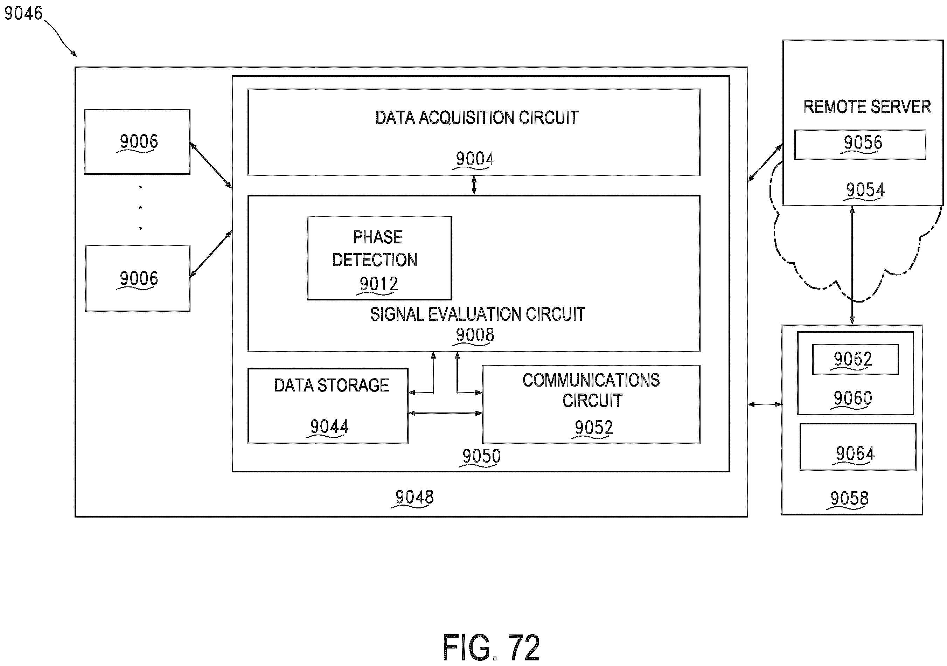

In embodiments, as shown in Figure 71, the communication circuit 9052 may communicate data directly to a remote server 9054. In embodiments, as shown in Figure 72, the communication circuit 9052 may communicate data to an intermediate computer 9058 which may include a processor 9060 running an operating system 9062 and a data storage circuit 9064.

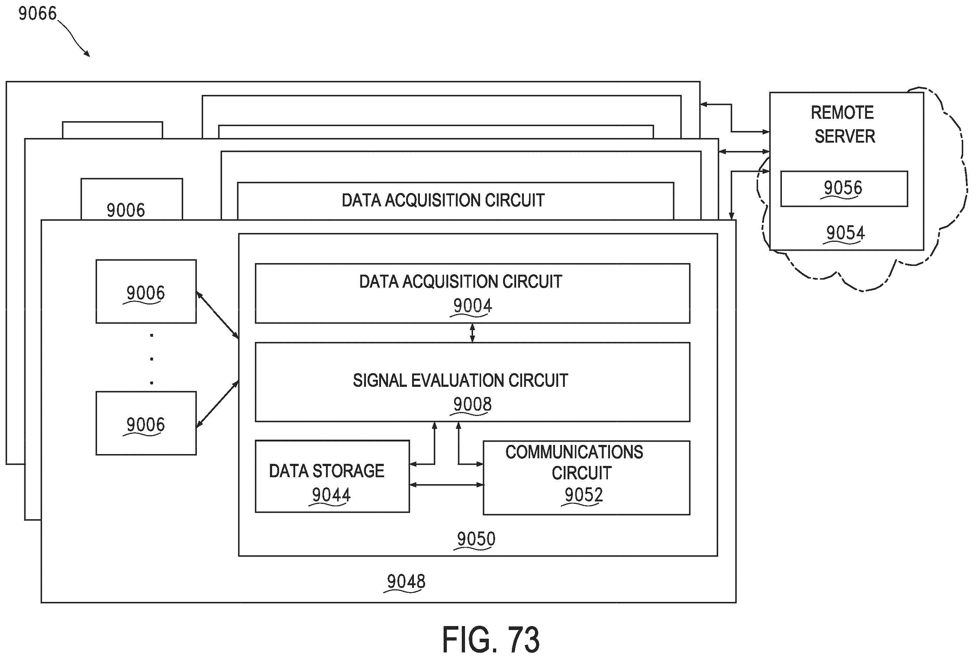

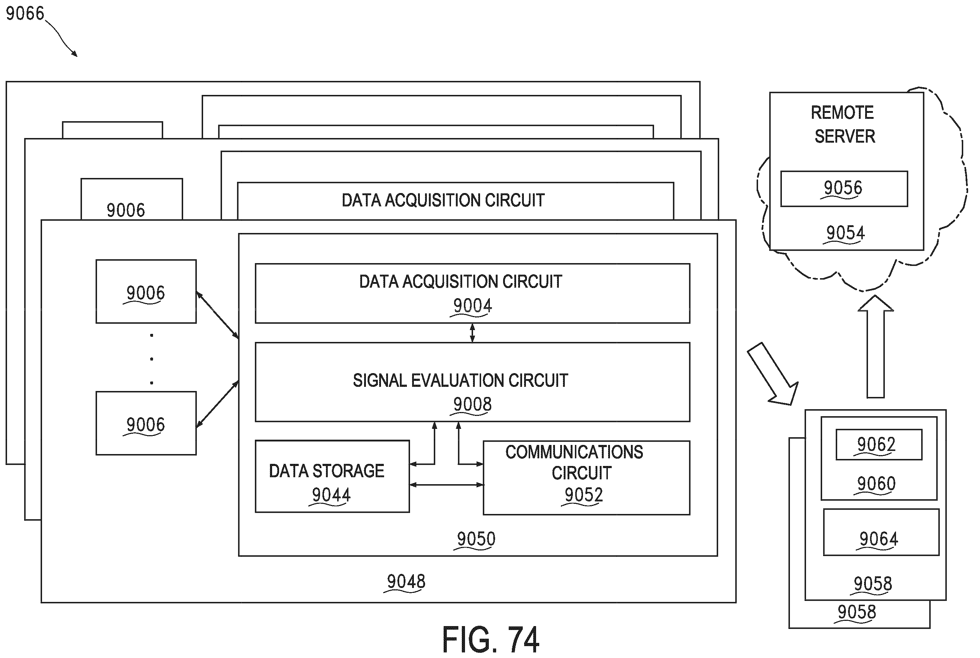

In embodiments, as illustrated in Figures 73 and 74, a data collection system 9066 may have a plurality of monitoring devices 9048 collecting data on multiple components in a single piece of equipment, collecting data on the same component across a plurality of pieces of equipment (both the same and different types of equipment) in the same facility as well as collecting data from monitoring devices in multiple facilities. A monitoring application 9056 on a remote server 9054 may receive and store one or more of detection values, timing signals or data coming from a plurality of the various monitoring devices 9048.

In embodiments, as shown in Figure 71, the communication circuit 9052 may communicate data directly to a remote server 9054. In embodiments, as shown in Figure 72, the communication circuit 9052 may communicate data to an intermediate computer 9058 which may include a processor 9060 running an operating system 9062 and a data storage circuit 9064. There may be an individual intermediate computer 9058 associated with each monitoring device 9048 or an individual intermediate computer 9058 may be associated with a plurality of monitoring devices 9048 where the intermediate computer 9058 may collect data from a plurality of data monitoring devices and send the cumulative data to the remote server 9054.

The monitoring application 9056 may select subsets of the detection values, timing signals and data to be jointly analyzed. Subsets for analysis may be selected based on a single type of component or a single type of equipment in which a component is operating. Subsets for analysis may be selected or grouped based on common operating conditions such as size of load, operational condition (e.g., intermittent, continuous), operating speed or tachometer, common ambient environmental conditions such as humidity, temperature, air or fluid particulate, and the like. Subsets for analysis may be selected based on the effects of other nearby equipment such as nearby machines rotating at similar frequencies, nearby equipment producing electromagnetic fields, nearby equipment producing heat, nearby equipment inducing movement or vibration, nearby equipment emitting vapors, chemicals or particulates, or other potentially interfering or intervening effects.

The monitoring application 9056 may then analyze the selected subset. In an illustrative example, data from a single component may be analyzed over different time periods such as one operating cycle, several operating cycles, a month, a year, the life of the component or the like. Data from multiple components of the same type may also be analyzed over different time periods. Trends in the data such as changes in frequency or amplitude may be correlated with failure and maintenance records associated with the same or a related component or piece of equipment. Trends in the data, such as changing rates of change associated with start-up or different points in the process, may be identified. Additional data may be introduced into the analysis such as output product quality, output quantity (such as per unit of time), indicated success or failure of a process, and the like. Correlation of trends and values for different types of data may be analyzed to identify those parameters whose short-term analysis might provide the best prediction regarding expected performance. This information may be transmitted back to the monitoring device to update types of data collected and analyzed locally or to influence the design of future monitoring devices.

In embodiments, the monitoring application 9056 may have access to equipment specifications, equipment geometry, component specifications, component materials, anticipated state information for a plurality of component types, operational history, historical detection values, component life models and the like for use analyzing the selected subset using rule-based or model-based analysis. In embodiments, the monitoring application 9056 may feed a neural net with the selected subset to learn to recognize peaks in waveform patterns by feeding a large data set sample of waveform behavior of a given type within which peaks are designated (such as by human analysts).

A monitoring system for data collection in an industrial environment, the monitoring system comprising: a data acquisition circuit structured to interpret a plurality of detection values from a plurality of input sensors communicatively coupled to the data acquisition circuit, each of the plurality of detection values corresponding to at least one of the input sensors; a peak detection circuit structured to determine at least one peak value in response to the plurality of detection values; and a peak response circuit structured to perform at least one operation in response to the at least one peak value.

An example monitoring system further includes: wherein the at least one operation is further in response to at least one of: a change in amplitude of at least one of the plurality of detection values; a change in frequency or relative phase of at least one of the plurality of detection values; a rate of change in both amplitude and relative phase of at least one of the plurality of detection values; and a relative rate of change in amplitude and relative phase of at least one of the plurality of detection values' wherein the at least one operation comprises issuing an alert; wherein the alert may be one of haptic, audible or visual; further comprising a data storage circuit, wherein the relative phase difference and at least one of the detection values and the timing signal are stored wherein the at least one operation further comprises storing additional data in the data storage circuit wherein the storing additional data in the data storage circuit is further in response to at least one of: a change in the relative phase difference and a relative rate of change in the relative phase difference wherein the data acquisition circuit further comprises at least one multiplexer circuit whereby alternative combinations of detection values may be selected based on at least one of user input and a selected operating parameter for a machine, wherein each of the plurality of detection values corresponds to at least one of the input sensors wherein the at least one operation comprises enabling or disabling one or more portions of the multiplexer circuit, or altering the multiplexer control lines wherein the data acquisition circuit comprises at least two multiplexer circuits and the at least one operation comprises changing connections between the at least two multiplexer circuits.

A monitoring system for data collection in an industrial environment, the monitoring system structure to receive input corresponding to a plurality of sensors, includes a data acquisition circuit structured to interpret a plurality of detection values, each of the plurality of detection values corresponding to at least one of the input sensors; a peak detection circuit structured to determine at least one peak value in response to the plurality of detection values; and a peak response circuit structured to perform at least one operation in response to the at least one peak value.

An example monitoring system further includes: wherein the at least one operation is further in response to at least one of: a change in amplitude of at least one of the plurality of detection values; a change in frequency or relative phase of at least one of the plurality of detection values; a rate of change in both amplitude and relative phase of at least one of the plurality of detection values; and a relative rate of change in amplitude and relative phase of at least one of the plurality of detection values wherein the at least one operation comprises issuing an alert wherein the alert may be one of haptic, audible or visual further comprising a data storage circuit, wherein the relative phase difference and at least one of the detection values and the timing signal are stored wherein the at least one operation further comprises storing additional data in the data storage circuit wherein the storing additional data in the data storage circuit is further in response to at least one of: a change in the relative phase difference and a relative rate of change in the relative phase difference wherein the data acquisition circuit further comprises at least one multiplexer circuit whereby alternative combinations of detection values may be selected based on at least one of user input and a selected operating parameter for a machine, wherein each of the plurality of detection values corresponds to at least one of the input sensors wherein the at least one operation comprises enabling or disabling one or more portions of the multiplexer circuit, or altering the multiplexer control lines wherein the data acquisition circuit comprises at least two multiplexer circuits and the at least one operation comprises changing connections between the at least two multiplexer circuits.

An example system for data collection, processing, and utilization of signals in an industrial environment includes: a plurality of monitoring devices, each monitoring device comprising: a data acquisition circuit structured to interpret a plurality of detection values from a plurality of input sensors communicatively coupled to the data acquisition circuit, each of the plurality of detection values corresponding to at least one of the input sensors; a peak detection circuit structured to determine at least one peak value in response to the plurality of detection values; a peak response circuit structured to select at least one detection value in response to the at least one peak value; a communication circuit structured to communicate the at least one selected detection value to a remote server; and a monitoring application on the remote server structured to: receive the at least one selected detection value; jointly analyze received detection values from a subset of the plurality of monitoring devices; and recommend an action.

An example system further includes: the system further structured to subset detection values based on one of anticipated life of a component associated with detection values, type of the equipment associated with detection values, and operational conditions under which detection values were measured; wherein the analysis of the subset of detection values comprises feeding a neural net with the subset of detection values and supplemental information to learn to recognize various operating states, health states, life expectancies and fault states utilizing deep learning techniques; wherein the supplemental information comprises one of component specification, component performance, equipment specification, equipment performance, maintenance records, repair records and an anticipated state model wherein the at least one operation is further in response to at least one of: a change in amplitude of at least one of the plurality of detection values; a change in frequency or relative phase of at least one of the plurality of detection values; a rate of change in both amplitude and relative phase of at least one the plurality of detection values; and a relative rate of change in amplitude and relative phase of at least one the plurality of detection values wherein the at least one operation comprises issuing an alert wherein the alert may be one of haptic, audible and visual further comprising a data storage circuit, wherein the relative phase difference and at least one of the detection values and the timing signal are stored wherein the at least one operation further comprises storing additional data in the data storage circuit wherein the storing additional data in the data storage circuit is further in response to at least one of: a change in the relative phase difference and a relative rate of change in the relative phase difference wherein the data acquisition circuit further comprises at least one multiplexer circuit whereby alternative combinations of detection values may be selected based on at least one of user input and a selected operating parameter for a machine, wherein each of the plurality of detection values corresponds to at least one of the input sensors wherein the at least one operation comprises enabling or disabling one or more portions of the multiplexer circuit, or altering the multiplexer control lines and/or wherein the data acquisition circuit comprises at least two multiplexer circuits and the at least one operation comprises changing connections between the at least two multiplexer circuits.

An example motor monitoring system, includes: a data acquisition circuit structured to interpret a plurality of detection values from a plurality of input sensors communicatively coupled to the data acquisition circuit, each of the plurality of detection values corresponding to at least one of the input sensors; a data storage circuit structured to store specifications, system geometry, and anticipated state information for the motor and motor components, store historical motor performance and buffer the plurality of detection values for a predetermined length of time; a peak detection circuit structured to determine a plurality of peak values comprising at least a temperature peak value, a speed peak value and a vibration peak value in response to the plurality of detection values and analyze the peak values relative to buffered detection values, specifications and anticipated state information resulting in a motor performance parameter; and a peak response circuit structured to perform at least one operation in response to one of a peak value and a motor system performance parameter.

An example system for estimating a vehicle steering system performance parameter, the device includes: a data acquisition circuit structured to interpret a plurality of detection values from a plurality of input sensors communicatively coupled to the data acquisition circuit, each of the plurality of detection values corresponding to at least one of the input sensors; a data storage circuit structured to store specifications, system geometry, and anticipated state information for the vehicle steering system, the rack, the pinion, and the steering column, store historical steering system performance and buffer the plurality of detection values for a predetermined length of time; a peak detection circuit structured to determine a plurality of peak values comprising at least a temperature peak value, a speed peak value and a vibration peak value in response to the plurality of detection values and analyze the peak values relative to buffered detection values, specifications and anticipated state information resulting in a vehicle steering system performance parameter; and a peak response circuit structured to perform at least one operation in response to one of a peak value and a vehicle steering system performance parameter.

An example system for estimating a pump performance parameter, includes: a data acquisition circuit structured to interpret a plurality of detection values from a plurality of input sensors communicatively coupled to the data acquisition circuit, each of the plurality of detection values corresponding to at least one of the input sensors; a data storage circuit structured to store specifications, system geometry, and anticipated state information for the pump and pump components associated with the detection values, store historical pump performance and buffer the plurality of detection values for a predetermined length of time; a peak detection circuit structured to determine a plurality of peak values comprising at least a temperature peak value, a speed peak value and a vibration peak value in response to the plurality of detection values and analyze the peak values relative to buffered detection values, specifications and anticipated state information resulting in a pump performance parameter; and a peak response circuit structured to perform at least one operation in response to one of a peak value and a pump performance parameter. In certain further embodiments, the example system includes wherein the pump is a water pump in a car and wherein the pump is a mineral pump.

An example system for estimating a drill performance parameter for a drilling machine, includes a data acquisition circuit structured to interpret a plurality of detection values from a plurality of input sensors communicatively coupled to the data acquisition circuit, each of the plurality of detection values corresponding to at least one of the input sensors; a data storage circuit structured to store specifications, system geometry, and anticipated state information for the drill and drill components associated with the detection values, store historical drill performance and buffer the plurality of detection values for a predetermined length of time; a peak detection circuit structured to determine a plurality of peak values comprising at least a temperature peak value, a speed peak value and a vibration peak value in response to the plurality of detection values and analyze the peak values relative to buffered detection values, specifications and anticipated state information resulting in a drill performance parameter; and a peak response circuit structured to perform at least one operation in response to one of a peak value and a drill performance parameter. An example system further includes wherein the drilling machine is one of an oil drilling machine and a gas drilling machine.

An example system for estimating a conveyor health parameter, the system includes: a data acquisition circuit structured to interpret a plurality of detection values from a plurality of input sensors communicatively coupled to the data acquisition circuit, each of the plurality of detection values corresponding to at least one of the input sensors; a data storage circuit structured to store specifications, system geometry, and anticipated state information for a conveyor and conveyor components associated with the detection values, store historical conveyor performance and buffer the plurality of detection values for a predetermined length of time; a peak detection circuit structured to determine a plurality of peak values comprising at least a temperature peak value, a speed peak value and a vibration peak value in response to the plurality of detection values and analyze the peak values relative to buffered detection values, specifications and anticipated state information resulting in a conveyor performance parameter; and a peak response circuit structured to perform at least one operation in response to one of a peak value and a conveyor performance parameter.

An example system for estimating an agitator health parameter, the system includes: a data acquisition circuit structured to interpret a plurality of detection values from a plurality of input sensors communicatively coupled to the data acquisition circuit, each of the plurality of detection values corresponding to at least one of the input sensors; a data storage circuit structured to store specifications, system geometry, and anticipated state information for an agitator and agitator components associated with the detection values, store historical agitator performance and buffer the plurality of detection values for a predetermined length of time; a peak detection circuit structured to determine a plurality of peak values comprising at least a temperature peak value, a speed peak value and a vibration peak value in response to the plurality of detection values and analyze the peak values relative to buffered detection values, specifications and anticipated state information resulting in an agitator performance parameter; and a peak response circuit structured to perform at least one operation in response to one of a peak value and an agitator performance parameter. In certain embodiments, a system further includes where the agitator is one of a rotating tank mixer, a large tank mixer, a portable tank mixer, a tote tank mixer, a drum mixer, a mounted mixer and a propeller mixer.

An example system for estimating a compressor health parameter, the system includes: a data acquisition circuit structured to interpret a plurality of detection values from a plurality of input sensors communicatively coupled to the data acquisition circuit, each of the plurality of detection values corresponding to at least one of the input sensors; a data storage circuit structured to store specifications, system geometry, and anticipated state information for a compressor and compressor components associated with the detection values, store historical compressor performance and buffer the plurality of detection values for a predetermined length of time; a peak detection circuit structured to determine a plurality of peak values comprising at least a temperature peak value, a speed peak value and a vibration peak value in response to the plurality of detection values and analyze the peak values relative to buffered detection values, specifications and anticipated state information resulting in a compressor performance parameter; and a peak response circuit structured to perform at least one operation in response to one of a peak value and a compressor performance parameter.

An example system for estimating an air conditioner health parameter, the system includes: a data acquisition circuit structured to interpret a plurality of detection values from a plurality of input sensors communicatively coupled to the data acquisition circuit, each of the plurality of detection values corresponding to at least one of the input sensors; a data storage circuit structured to store specifications, system geometry, and anticipated state information for an air conditioner and air conditioner components associated with the detection values, store historical air conditioner performance and buffer the plurality of detection values for a predetermined length of time; a peak detection circuit structured to determine a plurality of peak values comprising at least a temperature peak value, a speed peak value, a pressure value and a vibration peak value in response to the plurality of detection values and analyze the peak values relative to buffered detection values, specifications and anticipated state information resulting in an air conditioner performance parameter; and a peak response circuit structured to perform at least one operation in response to one of a peak value and an air conditioner performance parameter.

An example system for estimating a centrifuge health parameter, the system includes: a data acquisition circuit structured to interpret a plurality of detection values from a plurality of input sensors communicatively coupled to the data acquisition circuit, each of the plurality of detection values corresponding to at least one of the input sensors; a data storage circuit structured to store specifications, system geometry, and anticipated state information for a centrifuge and centrifuge components associated with the detection values, store historical centrifuge performance and buffer the plurality of detection values for a predetermined length of time; a peak detection circuit structured to determine a plurality of peak values comprising at least a temperature peak value, a speed peak value and a vibration peak value in response to the plurality of detection values and analyze the peak values relative to buffered detection values, specifications and anticipated state information resulting in a centrifuge performance parameter; and a peak response circuit structured to perform at least one operation in response to one of a peak value and a centrifuge performance parameter.

Bearings are used throughout many different types of equipment and applications. Bearings may be present in or supporting shafts, motors, rotors, stators, housings, frames, suspension systems and components, gears, gear sets of various types, other bearings, and other elements. Bearings may be used as support for high speed vehicles such as maglev trains. Bearings are used to support rotating shafts for engines, motors, generators, fans, compressors, turbines and the like. Giant roller bearings may be used to support buildings and physical infrastructure. Different types of bearings may be used to support conventional, planetary and other types of gears. Bearings may be used to support transmissions and gear boxes such as roller thrust bearings, for example. Bearings may be used to support wheels, wheel hubs and other rolling parts using tapered roller bearings.

There are many different types of bearings such as roller bearings, needle bearings, sleeve bearings, ball bearings, radial bearings, thrust load bearings including ball thrust bearings used in low speed applications and roller thrust bearings, taper bearings and tapered roller bearings, specialized bearings, magnetic bearings, giant roller bearings, jewel bearings (e.g., Sapphire), fluid bearings, flexure bearings to support bending element loads, and the like. References to bearings throughout this disclosure is intended to include, but not be limited by, the terms listed above.

In embodiments, information about the health or other status or state information of or regarding a bearing in a piece of industrial equipment or in an industrial process may be obtained by monitoring the condition of various components of the industrial equipment or industrial process. Monitoring may include monitoring the amplitude and/or frequency and/or phase of a sensor signal measuring attributes such as temperature, humidity, acceleration, displacement and the like.

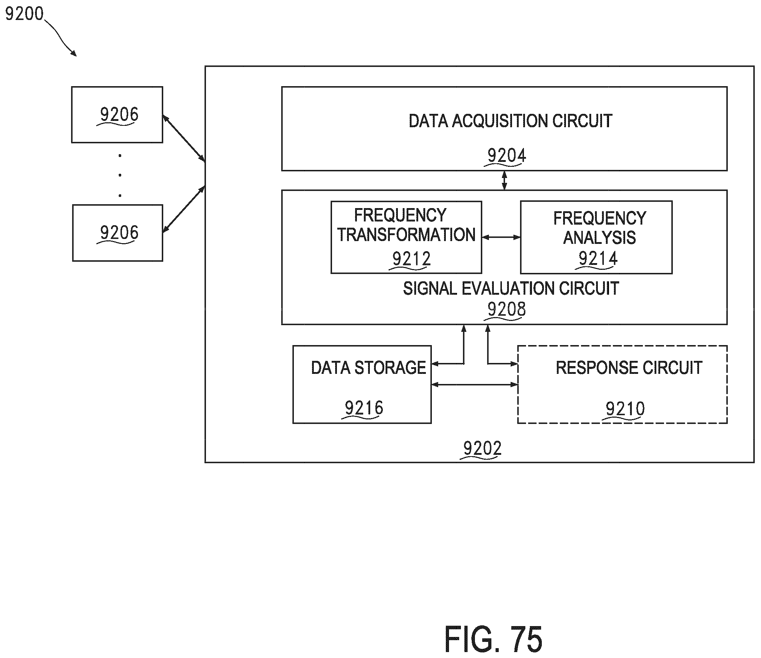

An embodiment of a data monitoring device 9200 is shown in Figure 75 and may include a plurality of sensors 9206 communicatively coupled to a controller 9202. The controller 9202 may include a data acquisition circuit 9204, a data storage circuit 9216, a signal evaluation circuit 9208 and, optionally, a response circuit 9210. The signal evaluation circuit 9208 may comprise a frequency transformation circuit 9212 and a frequency evaluation circuit 9214.

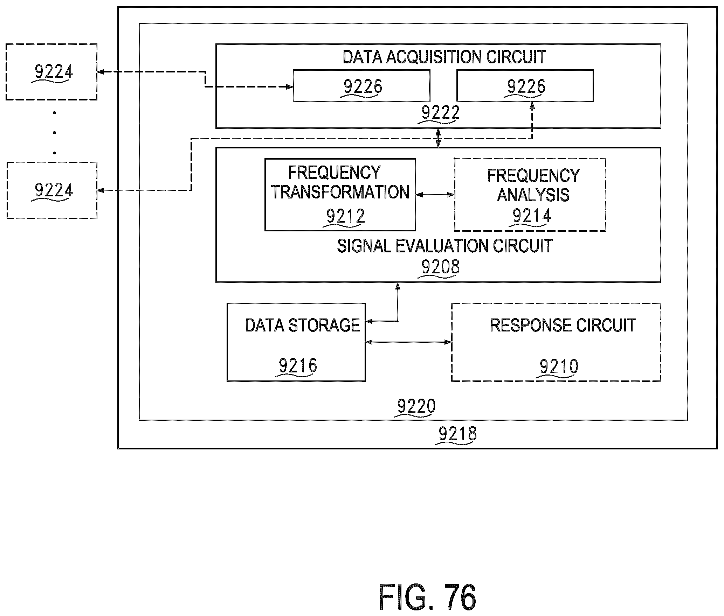

The plurality of sensors 9206 may be wired to ports 9226 (reference Figure 76) on the data acquisition circuit 9204. The plurality of sensors 9206 may be wirelessly connected to the data acquisition circuit 9204. The data acquisition circuit 9204 may be able to access detection values corresponding to the output of at least one of the plurality of sensors 9206 where the sensors 9206 may be capturing data on different operational aspects of a bearing or piece of equipment or infrastructure.

The selection of the plurality of sensors 9206 for a data monitoring device 9200 designed for a specific bearing or piece of equipment may depend on a variety of considerations such as accessibility for installing new sensors, incorporation of sensors in the initial design, anticipated operational and failure conditions, reliability of the sensors, and the like. The impact of failure may drive the extent to which a bearing or piece of equipment is monitored with more sensors and/or higher capability sensors being dedicated to systems where unexpected or undetected bearing failure would be costly or have severe consequences.

The signal evaluation circuit 9208 may process the detection values to obtain information about a bearing being monitored. The frequency transformation circuit 9212 may transform one or more time-based detection values to frequency information. The transformation may be accomplished using techniques such as a digital Fast Fourier transform ("FFT"), Laplace transform, Z-transform, wavelet transform, other frequency domain transform, or other digital or analog signal analysis techniques, including, without limitation, complex analysis, including complex phase evolution analysis.

The frequency evaluation circuit 9214 (or frequency analysis circuit) may be structured to detect signals at frequencies of interest. Frequencies of interest may include frequencies higher than the frequency at which the equipment rotates (as measured by a tachometer, for instance), various harmonics and/or resonant frequencies associated with the equipment design and operating conditions such as multiples of shaft rotation velocities or other rotating components for the equipment that is borne by the bearings. Changes in energy at frequencies close to the operating frequency may be an indicator of balance/imbalance in the system. Changes in energy at frequencies on the order of twice the operating frequency may be indicative of a system misalignment - for example, on the coupling, or a looseness in the system, (e.g., rattling at harmonics of the operating frequency). Changes in energy at frequencies close to three or four times the operating frequency, corresponding to the number of bolts on a coupling, may indicate wear of on one of the couplings. Changes in energy at frequencies of four, five, or more times the operating frequency may relate back to something that has a corresponding number of elements, such as if there are energy peaks or activity around five times the operating frequency there may be wear or an imbalance in a five-vane pump or the like.

In an illustrative and non-limiting example, in the analysis of roller bearings, frequencies of interest may include ball spin frequencies, cage spin frequencies, inner race frequency (as bearings often sit on a race inside a cage), outer race frequency and the like. Bearings that are damaged or beginning to fail may show humps of energy at the frequencies mentioned above and elsewhere in this disclosure. The energy at these frequencies may increase over time as the bearings wear more and become more damaged due to more variations in rotational acceleration and pings.

In an illustrative and non-limiting example, bad bearings may show humps of energy and the intensity of high frequency measurements may start to grow over time as bearings wear and become imperfect (greater acceleration and pings may show up in high frequency measurement domains). Those measurements may be indicators of air gaps in the bearing system. As bearings begin to wear, harder hits may cause the energy signal to move to higher frequencies.

In embodiments, the signal evaluation circuit 9208 may also include one or more of a phase detection circuit, a phase lock loop circuit, a bandpass filter circuit, a peak detection circuit, and the like.

In embodiments, the signal evaluation circuit 9208 may include a transitory signal analysis circuit. Transient signals may cause small amplitude vibrations. However, the challenge in bearing analysis is that you may receive a signal associated with a single or non-periodic impact and an exponential decay. Thus, the oscillation of the bearing may not be represented by a single sine wave, but rather by a spectrum of many high frequency sine waves. For example, a signal from a failing bearing may only be seen, in a time-based signal, as a low amplitude spike for a short amount of time. A signal from a failing bearing may be lower in amplitude than a signal associated with an imbalance even though the consequences of a failed bearing may be more significant. It is important to be able to identify these signals. This type of low amplitude, transient signal may be best analyzed using transient analysis rather than a conventional frequency transformation, such as an FFT, which would treat the signal like a low frequency sine wave. A higher resolution data stream may also provide additional data for the detection of transitory signals in low speed operations. The identification of transitory signals may enable the identification of defects in a piece of equipment or component operating at low RPMs.

In embodiments, the transitory signal analysis circuit for bearing analysis may include envelope modulation analysis and other transitory signal analysis techniques. The signal evaluation circuit 9208 may store long stream of detection values to the data storage circuit 9216. The transitory signal analysis circuit may use envelope analysis techniques on those long streams of detection values to identify transient effects (such as impacts) which may not be identified by conventional sine wave analysis (such as FFTs).

The signal evaluation circuit 9208 may utilize transitory signal analysis models optimized for the type of component being measured such as bearings, gears, variable speed machinery and the like. In an illustrative and non-limiting example, a gear may resonate close to its average rotational speed. In an illustrative and non-limiting example, a bearing may resonate close to the bearing rotation frequency and produce a ringing in amplitude around that frequency. For example, if the shaft inner race is wearing there may be chatter between the inner race and the shaft resulting in amplitude modulation to the left and right of the bearing frequency. The amplitude modulation may demonstrate its own sine wave characteristics with its own side bands. Various signal processing techniques may be used to eliminate the sinusoidal component, resulting in a modulation envelope for analysis.

The signal evaluation circuit 9208 may be optimized for variable speed machinery. Historically, variable speed machinery was expensive to make, and it was common to use DC motors and variable sheaves, such that flow could be controlled using vanes. Variable speed motors became more common with solid-state drive advances ("SCR devices"). The base operating frequency of equipment may be varied from the 50-60 Hz provided by standard utility companies and either and slowed down or sped up to run the equipment at different speeds depending on the application. The ability to run the equipment at varying speeds may result in energy savings. However, depending on the equipment geometry, there may be some speeds which create vibrations at resonant frequencies, reducing the life of the components. Variable speed motors may also emit electricity into bearings which may damage the bearings. In embodiments, the analysis of long data streams for envelope modulation analysis and other transitory signal analysis techniques as described herein may be useful in identifying these frequencies such that control schemes for the equipment may be designed to avoid those speeds which result in unacceptable vibrations and/or damage to the bearings.

In an illustrative and non-limiting example, heating, ventilation and air conditioning ("HVAC") systems may be assembled on site using variable speed motors, fans, belts, compressors and the like where the operating speeds are not constant, and their relative relationships are unknown. In an illustrative and non-limiting example, variable speed motors may be used in fan pumps for building air circulation. Variable speed motors may be used to vary the speed of conveyors - for example, in manufacturing assembly lines or steel mills. Variable speed motors may be used for fans in a pharmaceutical process, such as where it may be critical to avoid vibration.

In an illustrative and non-limiting example, sleeve bearings may be analyzed for defects. Sleeve bearings typically have an oil system. If the oil flow stops or the oil becomes severely contaminated, failure can occur very quickly. Therefore, a fluid particulate sensor or fluid pressure sensors may be an important source of detection values.

In an illustrative and non-limiting example, fan integrity may be evaluated by measuring air pulsations related to blade pass frequencies. For example, if a fan has 12 blades, 12 air pulsations may be measured. Variations in the amplitude of the pulsations associated with the different blades may be indicative of changes in a fan blade. Changes in frequencies associated with the air pulsations may be indicative of bearing problems.

In an illustrative and non-limiting example, compressors used in in the gas and oil field or in gas handling equipment on an assembly line may be evaluated by measuring the periodic increases in energy/pressure in the storage vessel as gas is pumped into the vessel. Periodic variations in the amplitude of the energy increases may be associated with piston wear or damage to a portion of a rotary screw. Phase evaluation of the energy signal relative to timing signals may be helpful in identifying which piston or portion of the rotary screw has damage. Changes in frequencies associated with the energy pulsations may be indicative of bearing problems.

In an illustrative and non-limiting example, cavitation/air pockets in pumps may create shuttering in the pump housing and the output flow which may be identified with the frequency transformation and frequency analysis techniques described above and elsewhere herein.

In an illustrative and non-limiting example, the frequency transformation and frequency analysis techniques described above and elsewhere herein may assist in the identification of problems in components of building HVAC systems such as big fans. If the dampers of the system are set poorly it may result in ducts pulsing or vibrating as air is pushed through the system. Monitoring of vibration sensors on the ducts may assist in the balancing of the system. If there are defects in the blades of the big fan this may also result in uneven air flow and resulting pulsation in the buildings ductwork.

In an illustrative and non-limiting example, detection values from acoustical sensors located close to the bearings may assist in the identification of issues in the engagement between gears or bad bearings. Based on a knowledge of gear ratios, such as the "in" and "out" gear ratios, for a system and measurements of the input and output rotational speed, detection values may be evaluated for energy occurring at those ratios, which in turn may be used to identify bad bearings. This could be done with simple off the shelf motors rather than requiring extensive retrofitting of the motor with sensors.

Based on the output of its various components, the signal evaluation circuit 9208 may make a bearing life prediction, identify a bearing health parameter, identify a bearing performance parameter, determine a bearing health parameter (e.g., fault conditions), and the like. The signal evaluation circuit 9208 may identify wear on a bearing, identify the presence of foreign matter (e.g., particulates) in the bearings, identify air gaps or a loss of fluid in oil/fluid coated bearings, identify a loss of lubrication in a set of bearings, identify a loss of power for magnetic bearings and the like, identify strain/stress of flexure bearings, and the like. The signal evaluation circuit 9208 may identify optimal operation parameters for a piece of equipment to extend bearing life. The signal evaluation circuit 9208 may identify behavior (resonant wobble) at a selected operational frequency (e.g., shaft rotation rate).

The signal evaluation circuit 9208 may communicate with the data storage circuit 9216 to access equipment specifications, equipment geometry, bearing specifications, bearing materials, anticipated state information for a plurality of bearing types, operational history, historical detection values, and the like for use in assessing the output of its various components. The signal evaluation circuit 9208 may buffer a subset of the plurality of detection values, intermediate data such as time-based detection values transformed to frequency information, filtered detection values, identified frequencies of interest, and the like for a predetermined length of time. The signal evaluation circuit 9208 may periodically store certain detection values in the data storage circuit 9216 to enable the tracking of component performance over time. In embodiments, based on relevant operating conditions and/or failure modes that may occur as detection values approach one or more criteria, the signal evaluation circuit 9208 may store data in the data storage circuit 9216 based on the fit of data relative to one or more criteria, such as those described throughout this disclosure. Based on one sensor input meeting or approaching specified criteria or range, the signal evaluation circuit 9208 may store additional data such as RPMs, component loads, temperatures, pressures, vibrations or other sensor data of the types described throughout this disclosure in the data storage circuit 9216. The signal evaluation circuit 9208 may store data at a higher data rate for greater granularity in future processing, the ability to reprocess at different sampling rates, and/or to enable diagnosing or post-processing of system information where operational data of interest is flagged, and the like.

Depending on the type of equipment, the component being measured, the environment in which the equipment is operating and the like, sensors 9206 may comprise one or more of, without limitation, a vibration sensor, an optical vibration sensor, a thermometer, a hygrometer, a voltage sensor, a current sensor, an accelerometer, a velocity detector, a light or electromagnetic sensor (e.g., determining temperature, composition and/or spectral analysis, and/or object position or movement), an image sensor, a structured light sensor, a laser-based image sensor, an infrared sensor, an acoustic wave sensor, a heat flux sensor, a displacement sensor, a turbidity meter, a viscosity meter, a load sensor, a tri-axial vibration sensor, an accelerometer, a tachometer, a fluid pressure meter, an air flow meter, a horsepower meter, a flow rate meter, a fluid particle detector, an acoustical sensor, a pH sensor, and the like, including, without limitation, any of the sensors described throughout this disclosure. and the documents incorporated by reference. The sensors may typically comprise at least a temperature sensor, a load sensor, a tri-axial sensor and a tachometer.

The sensors 9206 may provide a stream of data over time that has a phase component, such as relating to acceleration or vibration, allowing for the evaluation of phase or frequency analysis of different operational aspects of a piece of equipment or an operating component. The sensors 9206 may provide a stream of data that is not conventionally phase-based, such as temperature, humidity, load, and the like. The sensors 9206 may provide a continuous or near continuous stream of data over time, periodic readings, event-driven readings, and/or readings according to a selected interval or schedule.

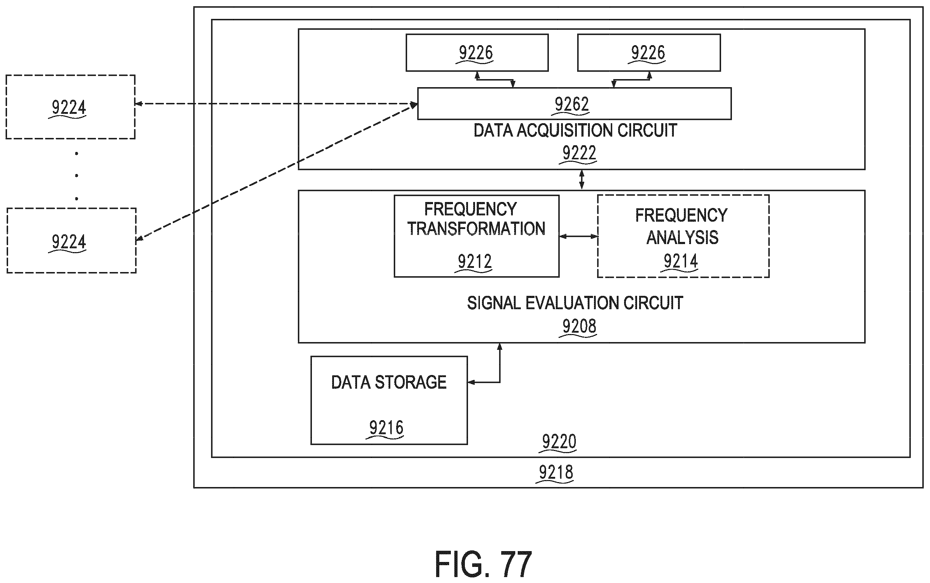

In embodiments, as illustrated in Figure 75, the sensors 9206 may be part of the data monitoring device 9200, referred to herein in some cases as a data collector, which in some cases may comprise a mobile or portable data collector. In embodiments, as illustrated in Figures 76 and 77, one or more external sensors 9224, which are not explicitly part of a monitoring device 9218 but rather are new, previously attached to or integrated into the equipment or component, may be opportunistically connected to or accessed by the monitoring device 9218. The monitoring device 9218 may include a controller 9220. The controller 9202 may include a data acquisition circuit 9222, a data storage circuit 9216, a signal evaluation circuit 9208 and, optionally, a response circuit 9210. The signal evaluation circuit 9208 may comprise a frequency transformation circuit 9212 and a frequency analysis circuit 9214. The data acquisition circuit 9222 may include one or more input ports 9226. The one or more external sensors 9224 may be directly connected to the one or more input ports 9226 on the data acquisition circuit 9222 of the controller 9220 or may be accessed by the data acquisition circuit 9222 wirelessly, such as by a reader, interrogator, or other wireless connection, such as over a short-distance wireless protocol. In embodiments as shown in Figure 77, a data acquisition circuit 9222 may further comprise a wireless communications circuit 9262. The data acquisition circuit 9222 may use the wireless communications circuit 9262 to access detection values corresponding to the one or more external sensors 9224 wirelessly or via a separate source or some combination of these methods.

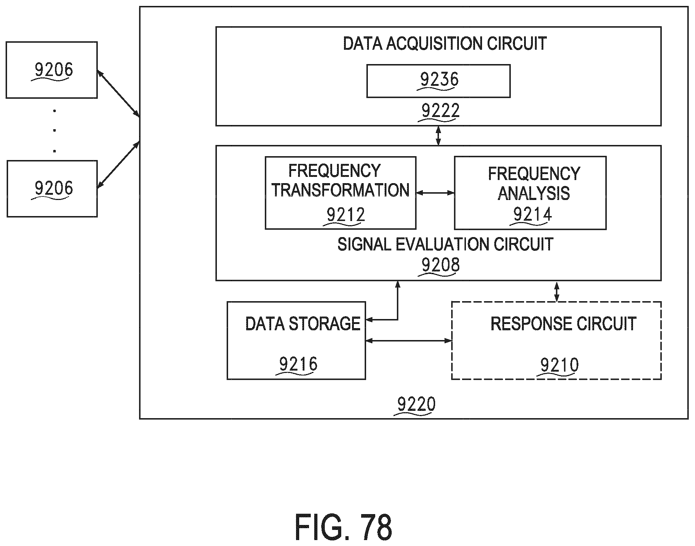

In embodiments, as illustrated in Figure 78, the data acquisition circuit 9222 may further comprise a multiplexer circuit 9236 as described elsewhere herein. Outputs from the multiplexer circuit 9236 may be utilized by the signal evaluation circuit 9208. The response circuit 9210 may have the ability to turn on and off portions of the multiplexor circuit 9236. The response circuit 9210 may have the ability to control the control channels of the multiplexor circuit 9236.

The response circuit 9210 may initiate actions based on a bearing performance parameter, a bearing health value, a bearing life prediction parameter, and the like. The response circuit 9210 may evaluate the results of the signal evaluation circuit 9208 and, based on certain criteria or the output from various components of the signal evaluation circuit 9208, initiate an action. The criteria may include a sensor's detection values at certain frequencies or phases relative to a timer signal where the frequencies or phases of interest may be based on the equipment geometry, equipment control schemes, system input, historical data, current operating conditions, and/or an anticipated response. The criteria may include a sensor's detection values at certain frequencies or phases relative to detection values of a second sensor. The criteria may include signal strength at certain resonant frequencies/harmonics relative to detection values associated with a system tachometer or anticipated based on equipment geometry and operation conditions. Criteria may include a predetermined peak value for a detection value from a specific sensor, a cumulative value of a sensor's corresponding detection value over time, a change in peak value, a rate of change in a peak value, and/or an accumulated value (e.g., a time spent above/below a threshold value, a weighted time spent above/below one or more threshold values, and/or an area of the detected value above/below one or more threshold values). The criteria may comprise combinations of data from different sensors such as relative values, relative changes in value, relative rates of change in value, relative values over time, and the like. The relative criteria may change with other data or information such as process stage, type of product being processed, type of equipment, ambient temperature and humidity, external vibrations from other equipment, and the like. The relative criteria may be reflected in one or more calculated statistics or metrics (including ones generated by further calculations on multiple criteria or statistics), which in turn may be used for processing (such as onboard a data collector or by an external system), such as to be provided as an input to one or more of the machine learning capabilities described in this disclosure, to a control system (which may be on board a data collector or remote, such as to control selection of data inputs, multiplexing of sensor data, storage, or the like), or as a data element that is an input to another system, such as a data stream or data package that may be available to a data marketplace, a SCADA system, a remote control system, a maintenance system, an analytic system, or other system.

Certain embodiments are described herein as detected values exceeding thresholds or predetermined values, but detected values may also fall below thresholds or predetermined values - for example, where an amount of change in the detected value is expected to occur, but detected values indicate that the change may not have occurred. For example, and without limitation, vibrational data may indicate system agitation levels, properly operating equipment, or the like, and vibrational data below amplitude and/or frequency thresholds may be an indication of a process that is not operating according to expectations. Except where the context clearly indicates otherwise, any description herein describing a determination of a value above a threshold and/or exceeding a predetermined or expected value is understood to include determination of a value below a threshold and/or falling below a predetermined or expected value.

The predetermined acceptable range may be based on anticipated system response or vibration based on the equipment geometry and control scheme such as number of bearings, relative rotational speed, influx of power to the system at a certain frequency, and the like. The predetermined acceptable range may also be based on long term analysis of detection values across a plurality of similar equipment and components and correlation of data with equipment failure.

In some embodiments, an alert may be issued based on some of the criteria discussed above. In an illustrative example, an increase in temperature and energy at certain frequencies may indicate a hot bearing that is starting to fail. In embodiments, the relative criteria for an alarm may change with other data or information such as process stage, type of product being processed on equipment, ambient temperature and humidity, external vibrations from other equipment and the like. In an illustrative and non-limiting example, the response circuit 9210 may initiate an alert if a vibrational amplitude and/or frequency exceeds a predetermined maximum value, if there is a change or rate of change that exceeds a predetermined acceptable range, and/or if an accumulated value based on vibrational amplitude and/or frequency exceeds a threshold.

In embodiments, response circuit 9210 may cause the data acquisition circuit 9204 to enable or disable the processing of detection values corresponding to certain sensors based on some of the criteria discussed above. This may include switching to sensors having different response rates, sensitivity, ranges, and the like, or accessing new sensors or types of sensors, and the like. Switching may be undertaken based on a model, a set of rules, or the like. In embodiments, switching may be under control of a machine learning system, such that switching is controlled based on one or more metrics of success, combined with input data, over a set of trials, which may occur under supervision of a human supervisor or under control of an automated system. Switching may involve switching from one input port to another (such as to switch from one sensor to another). Switching may involve altering the multiplexing of data, such as combining different streams under different circumstances. Switching may also involve activating a system to obtain additional data, such as moving a mobile system (such as a robotic or drone system), to a location where different or additional data is available (such as positioning an image sensor for a different view or positioning a sonar sensor for a different direction of collection) or to a location where different sensors can be accessed (such as moving a collector to connect up to a sensor that is disposed at a location in an environment by a wired or wireless connection). This switching may be implemented by changing the control signals for a multiplexor circuit 9236 and/or by turning on or off certain input sections of the multiplexor circuit 9236. The response circuit 9210 may make recommendations for the replacement of certain sensors in the future with sensors having different response rates, sensitivity, ranges, and the like. The response circuit 9210 may recommend design alterations for future embodiments of the component, the piece of equipment, the operating conditions, the process, and the like.

In embodiments, the response circuit 9210 may recommend maintenance at an upcoming process stop or initiate a maintenance call. The response circuit 9210 may recommend changes in process or operating parameters to remotely balance the piece of equipment. In embodiments, the response circuit 9210 may implement or recommend process changes - for example to lower the utilization of a component that is near a maintenance interval, operating off-nominally, or failed for purpose but still at least partially operational, to change the operating speed of a component (such as to put it in a lower-demand mode), to initiate amelioration of an issue (such as to signal for additional lubrication of a roller bearing set, or to signal for an alignment process for a system that is out of balance), and the like.

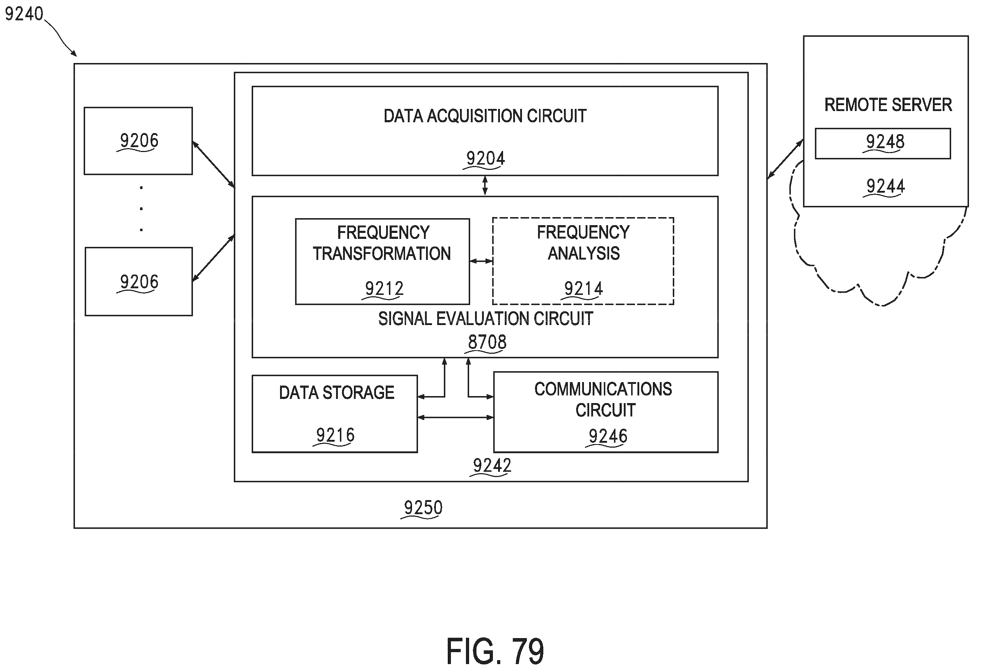

In embodiments as shown in Figures 79, 80, 81, and 82, a data monitoring system 9240 may include at least one data monitoring device 9250. The at least one data monitoring device 9250 may include sensors 9206 and a controller 9242 comprising a data acquisition circuit 9204, a signal evaluation circuit 9208, a data storage circuit 9216, and a communications circuit 9246. The signal evaluation circuit 9208 may include at least one of a frequency detection circuit 9212 and a frequency analysis circuit 9214. There may also be an optional response circuit as described above and elsewhere herein. The signal evaluation circuit 9208 may periodically share data with the communication circuit 9246 for transmittal to a remote server 9244 to enable the tracking of component and equipment performance over time and under varying conditions by a monitoring application 9248. Because relevant operating conditions and/or failure modes may occur as sensor values approach one or more criteria, the signal evaluation circuit 9208 may share data with the communication circuit 9246 for transmittal to the remote server 9244 based on the fit of data relative to one or more criteria. Based on one sensor input meeting or approaching specified criteria or range, the signal evaluation circuit 9208 may share additional data such as RPMs, component loads, temperatures, pressures, vibrations, and the like for transmittal. The signal evaluation circuit 9208 may share data at a higher data rate for transmittal to enable greater granularity in processing on the remote server.

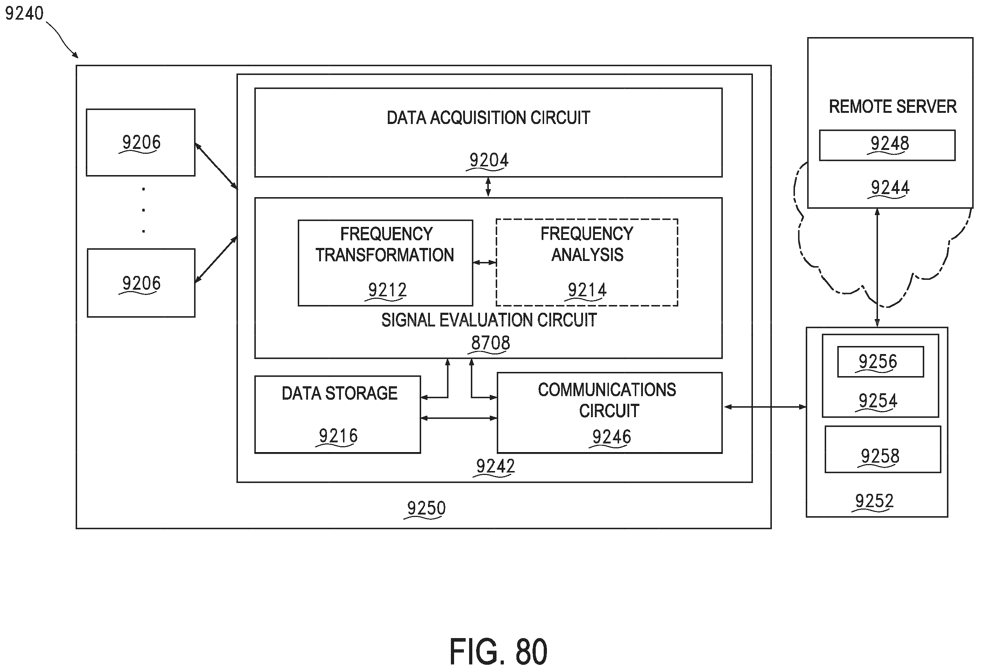

In embodiments, as shown in Figure 79, the communications circuit 9246 may communicate data directly to a remote server 9244. In embodiments, as shown in Figure 80, the communications circuit 9246 may communicate data to an intermediate computer 9252, which may include a processor 9254 running an operating system 9256 and a data storage circuit 9258. The intermediate computer 9252 may collect data from a plurality of data monitoring devices and send the cumulative data to the remote server 9244.

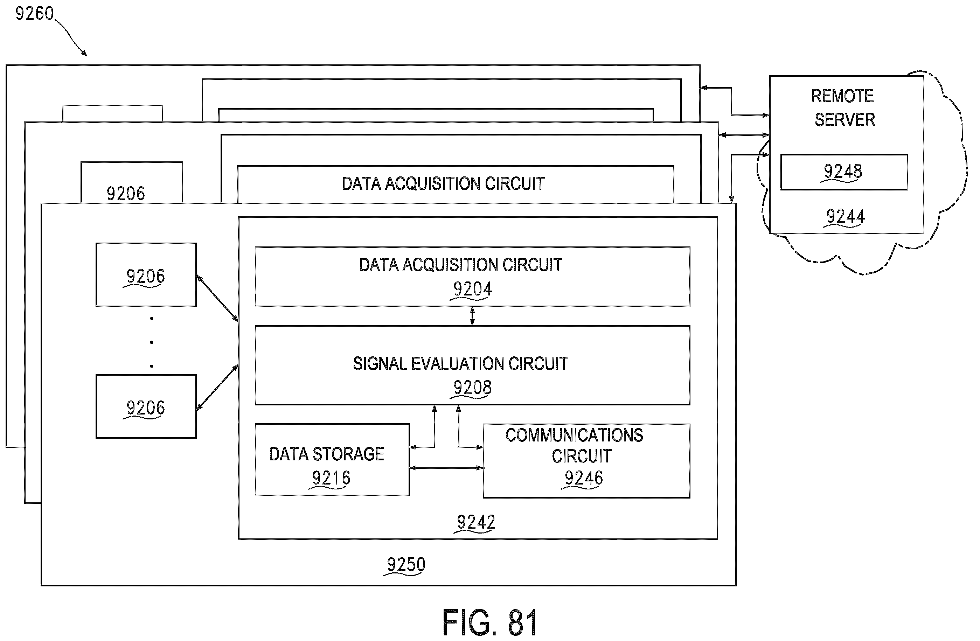

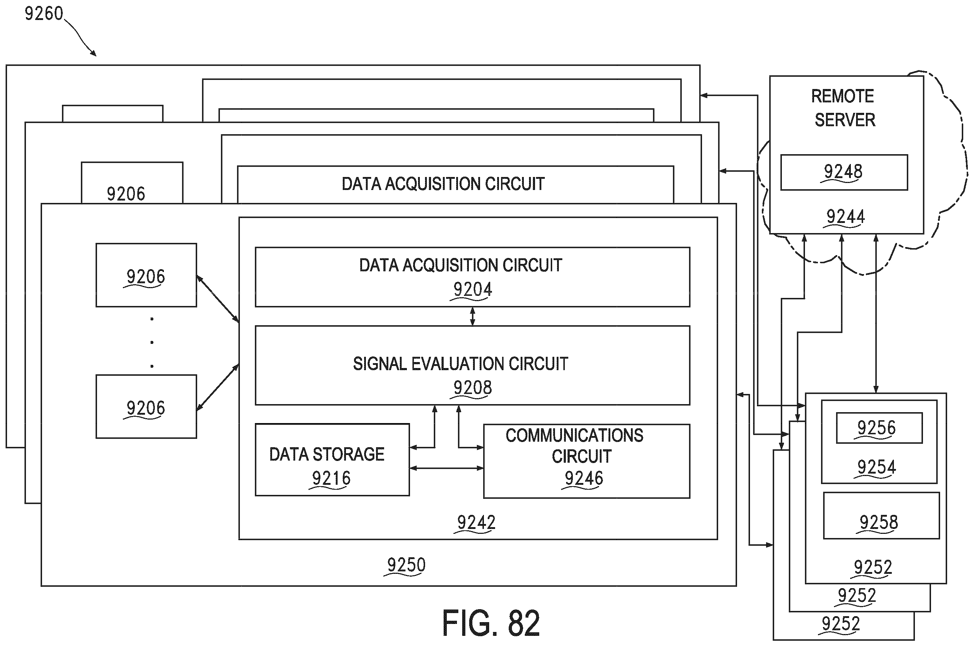

In embodiments, as illustrated in Figures 81 and 82, a data collection system 9260 may have a plurality of monitoring devices 9250 collecting data on multiple components in a single piece of equipment, collecting data on the same component across a plurality of pieces of equipment, (both the same and different types of equipment) in the same facility as well as collecting data from monitoring devices in multiple facilities. A monitoring application 9248 on a remote server 9244 may receive and store one or more of the following: detection values, timing signals and data coming from a plurality of the various monitoring devices 9250. In embodiments, as shown in Figure 81, the communications circuit 9246 may communicate data directly to a remote server 9244. In embodiments, as shown in Figure 82, the communications circuit 9246 may communicate data to an intermediate computer 9252, which may include a processor 9254 running an operating system 9256 and a data storage circuit 9258. There may be an individual intermediate computer 9252 associated with each monitoring device 9264 or an individual intermediate computer 9252 may be associated with a plurality of monitoring devices 9250 where the intermediate computer 9252 may collect data from a plurality of data monitoring devices and send the cumulative data to the remote server 9244.

The monitoring application 9248 may select subsets of the detection values, timing signals and data to be jointly analyzed. Subsets for analysis may be selected based on a bearing type, bearing materials, or a single type of equipment in which a bearing is operating. Subsets for analysis may be selected or grouped based on common operating conditions or operational history such as size of load, operational condition (e.g., intermittent, continuous), operating speed or tachometer, common ambient environmental conditions such as humidity, temperature, air or fluid particulate, and the like. Subsets for analysis may be selected based on common anticipated state information. Subsets for analysis may be selected based on the effects of other nearby equipment such as nearby machines rotating at similar frequencies, nearby equipment producing electromagnetic fields, nearby equipment producing heat, nearby equipment inducing movement or vibration, nearby equipment emitting vapors, chemicals or particulates, or other potentially interfering or intervening effects.

The monitoring application 9248 may analyze a selected subset. In an illustrative example, data from a single component may be analyzed over different time periods, such as one operating cycle, cycle-to-cycle comparisons, trends over several operating cycles/times such as a month, a year, the life of the component, or the like. Data from multiple components of the same type may also be analyzed over different time periods. Trends in the data such as changes in frequency or amplitude may be correlated with failure and maintenance records associated with the same component or piece of equipment. Trends in the data such as changing rates of change associated with start-up or different points in the process may be identified. Additional data may be introduced into the analysis such as output product quality, output quantity (such as per unit of time), indicated success or failure of a process, and the like. Correlation of trends and values for different types of data may be analyzed to identify those parameters whose short-term analysis might provide the best prediction regarding expected performance. The analysis may identify model improvements to the model for anticipated state information, recommendations around sensors to be used, positioning of sensors and the like. The analysis may identify additional data to collect and store. The analysis may identify recommendations regarding needed maintenance and repair and/or the scheduling of preventative maintenance. The analysis may identify recommendations around purchasing replacement bearings and the timing of the replacement of the bearings. The analysis may result in warning regarding the dangers of catastrophic failure conditions. This information may be transmitted back to the monitoring device to update types of data collected and analyzed locally or to influence the design of future monitoring devices.

In embodiments, the monitoring application 9248 may have access to equipment specifications, equipment geometry, bearing specifications, bearing materials, anticipated state information for a plurality of bearing types, operational history, historical detection values, bearing life models and the like for use analyzing the selected subset using rule-based or model-based analysis. In embodiments, the monitoring application 9248 may feed a neural net with the selected subset to learn to recognize various operating state, health states (e.g., lifetime predictions) and fault states utilizing deep learning techniques. In embodiments, a hybrid of the two techniques (model-based learning and deep learning) may be used.

In an illustrative and non-limiting example, the health of bearings on conveyors and lifters in an assembly line, in water pumps on industrial vehicles and in compressors in gas handling systems, in compressors situated out in the gas and oil fields, in factory air conditioning units and in factory mineral pumps may be monitored using the frequency transformation and frequency analysis techniques, data monitoring devices and data collection systems described herein.

In an illustrative and non-limiting example, the health of one or more of bearings, gears, blades, screws and associated shafts, motors, rotors, stators, gears, and other components of gear boxes, motors, pumps, vibrating conveyors, mixers, centrifuges, drilling machines, screw drivers and refining tanks situated in the oil and gas fields may be evaluated using the frequency transformation and frequency analysis techniques, data monitoring devices and data collection systems described herein.

In an illustrative and non-limiting example, the health of bearings and associated shafts, motors, rotors, stators, gears, and other components of rotating tank/-mixer agitators, mechanical/rotating agitators, and propeller agitators, to promote chemical reactions deployed in chemical and pharmaceutical production lines may be evaluated using the frequency transformation and frequency analysis techniques, data monitoring devices and data collection systems described herein.

In an illustrative and non-limiting example, the health of bearings and associated shafts, motors, rotors, stators, gears, and other components of vehicle systems such as steering mechanisms or engines may be evaluated using the frequency transformation and frequency analysis techniques, data monitoring devices and data collection systems described herein.

An example monitoring device for bearing analysis in an industrial environment, includes: a data acquisition circuit structured to interpret a plurality of detection values, each of the plurality of detection values corresponding to at least one of a plurality of input sensors communicatively coupled to the data acquisition circuit; a data storage for storing specifications and anticipated state information for a plurality of bearing types and buffering the plurality of detection values for a predetermined length of time; and a bearing analysis circuit structured to analyze buffered detection values relative to specifications and anticipated state information resulting in a bearing performance parameter.

In certain further embodiments, an example monitoring device includes one or more of: a response circuit to perform at least one operation in response to the bearing performance parameter, wherein the plurality of input sensors includes at least two sensors selected from the group consisting of a temperature sensor, a load sensor, an optical vibration sensor, an acoustic wave sensor, a heat flux sensor, an infrared sensor, an accelerometer, a tri-axial vibration sensor and a tachometer; wherein the at least one operation is further in response to at least one of: a change in amplitude of at least one of the plurality of detection values; a change in frequency or relative phase of at least one of the plurality of detection values; a rate of change in both amplitude and relative phase of at least one of the plurality of detection values; and a relative rate of change in amplitude and relative phase of at least one of the plurality of detection values; wherein the at least one operation comprises issuing an alert; wherein the alert may be one of haptic, audible and visual; wherein the at least one operation further comprises storing additional data in the data storage circuit; wherein the storing additional data in the data storage circuit is further in response to at least one of: a change in the relative phase difference and a relative rate of change in the relative phase difference.

An example monitoring device for bearing analysis in an industrial environment, the monitoring device includes: a data acquisition circuit structured to interpret a plurality of detection values, each of the plurality of detection values corresponding to at least one of a plurality of input sensors communicatively coupled to the data acquisition circuit; a data storage for storing specifications and anticipated state information for a plurality of bearing types and buffering the plurality of detection values for a predetermined length of time; and a bearing analysis circuit structured to analyze buffered detection values relative to specifications and anticipated state information resulting in a bearing health value.

In certain embodiments, an example monitoring device further includes one or more of: a response circuit to perform at least one operation in response to the bearing health value, wherein the plurality of input sensors includes at least two sensors selected from the group consisting of a temperature sensor, a load sensor, an optical vibration sensor, an acoustic wave sensor, a heat flux sensor, an infrared sensor, an accelerometer, a tri-axial vibration sensor and a tachometer; wherein the at least one operation is further in response to at least one of: a change in amplitude of at least one of the plurality of detection values; a change in frequency or relative phase of at least one of the plurality of detection values; a rate of change in both amplitude and relative phase of at least one of the plurality of detection values; and a relative rate of change in amplitude and relative phase of at least one of the plurality of detection values; wherein the at least one operation comprises issuing an alert; wherein the alert may be one of haptic, audible and visual; wherein the at least one operation further comprises storing additional data in the data storage circuit; wherein the storing additional data in the data storage circuit is further in response to at least one of: a change in the relative phase difference and a relative rate of change in the relative phase difference.

An example monitoring device for bearing analysis in an industrial environment, includes: a data acquisition circuit structured to interpret a plurality of detection values, each of the plurality of detection values corresponding to at least one of a plurality of input sensors communicatively coupled to the data acquisition circuit; a data storage for storing specifications and anticipated state information for a plurality of bearing types and buffering the plurality of detection values for a predetermined length of time; and a bearing analysis circuit structured to analyze buffered detection values relative to specifications and anticipated state information resulting in a bearing life prediction parameter.

In certain embodiments, a monitoring device further includes one or more of: a response circuit to perform at least one operation in response to the bearing life prediction parameter, wherein the plurality of input sensors includes at least two sensors selected from the group consisting of a temperature sensor, a load sensor, an optical vibration sensor, an acoustic wave sensor, a heat flux sensor, an infrared sensor, an accelerometer, a tri-axial vibration sensor and a tachometer; wherein the at least one operation is further in response to at least one of: a change in amplitude of at least one of the plurality of detection values; a change in frequency or relative phase of at least one of the plurality of detection values; a rate of change in both amplitude and relative phase of at least one of the plurality of detection values; and a relative rate of change in amplitude and relative phase of at least one of the plurality of detection values; wherein the at least one operation comprises issuing an alert; wherein the alert may be one of haptic, audible and visual; wherein the at least one operation further comprises storing additional data in the data storage circuit; wherein the storing additional data in the data storage circuit is further in response to at least one of: a change in the relative phase difference and a relative rate of change in the relative phase difference.

An example monitoring device for bearing analysis in an industrial environment, includes: a data acquisition circuit structured to interpret a plurality of detection values, each of the plurality of detection values corresponding to at least one of a plurality of input sensors communicatively coupled to the data acquisition circuit; a data storage for storing specifications and anticipated state information for a plurality of bearing types and buffering the plurality of detection values for a predetermined length of time; and a bearing analysis circuit structured to analyze buffered detection values relative to specifications and anticipated state information resulting in a bearing performance parameter, wherein the data acquisition circuit comprises a multiplexer circuit whereby alternative combinations of the detection values may be selected based on at least one of user input, a detected state and a selected operating parameter for a machine.

In certain further embodiments, an example monitoring device further includes one or more of: a response circuit to perform at least one operation in response to the bearing performance parameter, wherein the plurality of input sensors includes at least two sensors selected from the group consisting of a temperature sensor, a load sensor, an optical vibration sensor, an acoustic wave sensor, a heat flux sensor, an infrared sensor, an accelerometer, a tri-axial vibration sensor and a tachometer; a change in amplitude of at least one of the plurality of detection values; a change in frequency or relative phase of at least one of the plurality of detection values; a rate of change in both amplitude and relative phase of at least one of the plurality of detection values; and a relative rate of change in amplitude and relative phase of at least one of the plurality of detection values; wherein the at least one operation comprises issuing an alert; wherein the alert may be one of haptic, audible and visual; wherein the at least one operation further comprises storing additional data in the data storage circuit; wherein the storing additional data in the data storage circuit is further in response to at least one of: a change in the relative phase difference and a relative rate of change in the relative phase difference; wherein the at least one operation comprises enabling or disabling one or more portions of the multiplexer circuit, or altering the multiplexer control lines; wherein the data acquisition circuit comprises at least two multiplexer circuits and the at least one operation comprises changing connections between the at least two multiplexer circuits.

An example system for data collection, processing, and bearing analysis in an industrial environment includes: a plurality of monitoring devices, each monitoring device comprising: a data acquisition circuit structured to interpret a plurality of detection values, each of the plurality of detection values corresponding to at least one of a plurality of input sensors communicatively coupled to the data acquisition circuit; a data storage for storing specifications and anticipated state information for a plurality of bearing types and buffering the plurality of detection values for a predetermined length of time;

a bearing analysis circuit structured to analyze buffered detection values relative to specifications and anticipated state information resulting in a bearing life prediction; a communication circuit structured to communicate with a remote server providing the bearing life prediction and a portion of the buffered detection values to the remote server; and a monitoring application on the remote server structured to receive, store and jointly analyze a subset of the detection values from the plurality of monitoring devices.

In certain further embodiments, an example monitoring device includes one or more of: a response circuit to perform at least one operation in response to the bearing life prediction, wherein the plurality of input sensors includes at least two sensors selected from the group consisting of a temperature sensor, a load sensor, an optical vibration sensor, an acoustic wave sensor, a heat flux sensor, an infrared sensor, an accelerometer, a tri-axial vibration sensor and a tachometer; wherein the at least one operation is further in response to at least one of: a change in amplitude of at least one of the plurality of detection values; a change in frequency or relative phase of at least one of the plurality of detection values; a rate of change in both amplitude and relative phase of at least one of the plurality of detection values; and a relative rate of change in amplitude and relative phase of at least one of the plurality of detection values; wherein the at least one operation comprises issuing an alert; wherein the alert may be one of haptic, audible and visual; wherein the at least one operation further comprises storing additional data in the data storage circuit; wherein the storing additional data in the data storage circuit is further in response to at least one of: a change in the relative phase difference and a relative rate of change in the relative phase difference.

An example system for data collection, processing, and bearing analysis in an industrial environment comprising: a plurality of monitoring devices, each comprising: a data acquisition circuit structured to interpret a plurality of detection values, each of the plurality of detection values corresponding to at least one of a plurality of input sensors communicatively coupled to the data acquisition circuit; a data storage for storing specifications and anticipated state information for a plurality of bearing types and buffering the plurality of detection values for a predetermined length of time; a bearing analysis circuit structured to analyze buffered detection values relative to specifications and anticipated state information resulting in a bearing performance parameter; a communication circuit structured to communicate with a remote server providing the life prediction and a portion of the buffered detection values to the remote server; and a monitoring application on the remote server structured to receive, store and jointly analyze a subset of the detection values from the plurality of monitoring devices.

In certain further embodiments, an example monitoring device further includes one or more of: a response circuit to perform at least one operation in response to the bearing performance parameter, wherein the plurality of input sensors includes at least two sensors selected from the group consisting of a temperature sensor, a load sensor, an optical vibration sensor, an acoustic wave sensor, a heat flux sensor, an infrared sensor, an accelerometer, a tri-axial vibration sensor and a tachometer; wherein the at least one operation is further in response to at least one of: a change in amplitude of at least one of the plurality of detection values; a change in frequency or relative phase of at least one of the plurality of detection values; a rate of change in both amplitude and relative phase of at least one the plurality of detection values; and a relative rate of change in amplitude and relative phase of at least one the plurality of detection values; wherein the at least one operation comprises issuing an alert; wherein the alert may be one of haptic, audible and visual; wherein the at least one operation further comprises storing additional data in the data storage circuit; wherein storing additional data in the data storage circuit is further in response to at least one of: a change in the relative phase difference and a relative rate of change in the relative phase difference.

An example system for data collection, processing, and bearing analysis in an industrial environment includes: a plurality of monitoring devices, each monitoring device comprising: a data acquisition circuit structured to interpret a plurality of detection values, each of the plurality of detection values corresponding to at least one of a plurality of input sensors communicatively coupled to the data acquisition circuit; a streaming circuit for streaming at least a subset of the acquired detection values to a remote learning system; and a remote learning system including a bearing analysis circuit structured to analyze the detection values relative to a machine-based understanding of the state of the at least one bearing.

In certain further embodiments, an example system further includes one or more of: wherein the machine-based understanding is developed based on a model of the bearing that determines a state of the at least one bearing based at least in part on the relationship of the behavior of the bearing to an operating frequency of a component of the industrial machine; wherein the state of the at least one bearing is at least one of an operating state, a health state, a predicted lifetime state and a fault state; wherein the machine-based understanding is developed based by providing inputs to a deep learning machine, wherein the inputs comprise a plurality of streams of detection values for a plurality of bearings and a plurality of measured state values for the plurality of bearings; wherein the state of the at least one bearing is at least one of an operating state, a health state, a predicted lifetime state and a fault state.

An example method of analyzing bearings and sets of bearings, includes: receiving a plurality of detection values corresponding to data from a temperature sensor, a vibration sensor positioned near the bearing or set of bearings and a tachometer to measure rotation of a shaft associated with the bearing or set of bearings; comparing the detection values corresponding to the temperature sensor to a predetermined maximum level; filtering the detection values corresponding to the vibration sensor through a high pass filter where the filter is selected to eliminate vibrations associated with detection values associated with the tachometer; identifying rapid changes in at least one of a temperature peak and a vibration peak; identifying frequencies at which spikes in the filtered detection values corresponding to the vibration sensor occur and comparing frequencies and spikes in amplitude relative to an anticipated state information and specification associated with the bearing or set of bearings; and

determining a bearing health parameter.

An example device for monitoring roller bearings in an industrial environment, includes: a data acquisition circuit structured to interpret a plurality of detection values, each of the plurality of detection values corresponding to at least one of a plurality of input sensors communicatively coupled to the data acquisition circuit; a data storage circuit structured to store specifications and anticipated state information for a plurality of types of roller bearings and buffering the plurality of detection values for a predetermined length of time; a bearing analysis circuit structured to analyze buffered detection values relative to specifications and anticipated state information resulting in a bearing performance parameter; and

a response circuit to perform at least one operation in response to the bearing performance prediction, wherein the plurality of input sensors includes at least two sensors selected from the group consisting of a temperature sensor, a load sensor, an optical vibration sensor, an acoustic wave sensor, a heat flux sensor, an infrared sensor, an accelerometer, a tri-axial vibration sensor and a tachometer.

An example device for monitoring sleeve bearings in an industrial environment, includes: a data acquisition circuit structured to interpret a plurality of detection values, each of the plurality of detection values corresponding to at least one of a plurality of input sensors communicatively coupled to the data acquisition circuit; a data storage for storing sleeve bearing specifications and anticipated state information for types of sleeve bearings and buffering the plurality of detection values for a predetermined length of time; a bearing analysis circuit structured to analyze buffered detection values relative to specifications and anticipated state information resulting in a bearing performance parameter; and

a response circuit to perform at least one operation in response to the bearing performance parameter, wherein the plurality of input sensors includes at least two sensors selected from the group consisting of a temperature sensor, a load sensor, an optical vibration sensor, an acoustic wave sensor, a heat flux sensor, an infrared sensor, an accelerometer, a tri-axial vibration sensor and a tachometer.

An example system for monitoring pump bearings in an industrial environment, includes: a data acquisition circuit structured to interpret a plurality of detection values, each of the plurality of detection values corresponding to at least one of a plurality of input sensors communicatively coupled to the data acquisition circuit; a data storage for storing pump specifications, bearing specifications, anticipated state information for pump bearings and buffering the plurality of detection values for a predetermined length of time; a bearing analysis circuit structured to analyze buffered detection values relative to specifications and anticipated state information resulting in a bearing performance parameter; and

a response circuit to perform at least one operation in response to the bearing performance parameter, wherein the plurality of input sensors includes at least two sensors selected from the group consisting of a temperature sensor, a load sensor, an optical vibration sensor, an acoustic wave sensor, a heat flux sensor, an infrared sensor, an accelerometer, a tri-axial vibration sensor and a tachometer.

An example system for collection, processing, and analyzing pump bearings in an industrial environment includes: a plurality of monitoring devices, each comprising: a data acquisition circuit structured to interpret a plurality of detection values, each of the plurality of detection values corresponding to at least one of a plurality of input sensors communicatively coupled to the data acquisition circuit; a data storage for storing pump specifications, bearing specifications, anticipated state information for pump bearings and buffering the plurality of detection values for a predetermined length of time; a bearing analysis circuit structured to analyze buffered detection values relative to the pump and bearing specifications and anticipated state information resulting in a bearing performance parameter; a communication circuit structured to communicate with a remote server providing the bearing performance parameter and a portion of the buffered detection values to the remote server; and a monitoring application on the remote server structured to receive, store and jointly analyze a subset of the detection values from the plurality of monitoring devices.

An example system for estimating a conveyor health parameter, includes: a data acquisition circuit structured to interpret a plurality of detection values, each of the plurality of detection values corresponding to at least one of a plurality of input sensors, wherein the plurality of input sensors comprises at least one of an angular position sensor, an angular velocity sensor and an angular acceleration sensor positioned to measure the rotating component; a data storage circuit structured to store specifications, system geometry, and anticipated state information for the conveyor and associated rotating components, store historical conveyor and component performance and buffer the plurality of detection values for a predetermined length of time; a bearing analysis circuit structured to analyze buffered detection values relative to specifications and anticipated state information resulting in a bearing performance parameter; and

a system analysis circuit structured to utilize the bearing performance and at least one of an anticipated state, historical data and a system geometry to estimate a conveyor health performance.

An example system for estimating an agitator health parameter, includes: a data acquisition circuit structured to interpret a plurality of detection values, each of the plurality of detection values corresponding to at least one of a plurality of input sensors, wherein the plurality of input sensors comprises at least one of an angular position sensor, an angular velocity sensor and an angular acceleration sensor positioned to measure the rotating component; a data storage circuit structured to store specifications, system geometry, and anticipated state information for the agitator and associated components, store historical agitator and component performance and buffer the plurality of detection values for a predetermined length of time; a bearing analysis circuit structured to analyze buffered detection values relative to specifications and anticipated state information resulting in a bearing performance parameter; and a system analysis circuit structured to utilize the bearing performance and at least one of an anticipated state, historical data and a system geometry to estimate an agitation health parameter. In certain further embodiments, an example device further includes where the agitator is one of a rotating tank mixer, a large tank mixer, a portable tank mixers, a tote tank mixer, a drum mixer, a mounted mixer and a propeller mixer.

An example system for estimating a vehicle steering system performance parameter, includes: a data acquisition circuit structured to interpret a plurality of detection values, each of the plurality of detection values corresponding to at least one of a plurality of input sensors, wherein the plurality of input sensors comprises at least one of an angular position sensor, an angular velocity sensor and an angular acceleration sensor positioned to measure the rotating component; a data storage circuit structured to store specifications, system geometry, and anticipated state information for the vehicle steering system, the rack, the pinion, and the steering column, store historical steering system performance and buffer the plurality of detection values for a predetermined length of time; a bearing analysis circuit structured to analyze buffered detection values relative to specifications and anticipated state information resulting in a bearing performance parameter; and

a system analysis circuit structured to utilize the bearing performance and at least one of an anticipated state, historical data and a system geometry to estimate a vehicle steering system performance parameter.

An example system for estimating a pump performance parameter, includes: a data acquisition circuit structured to interpret a plurality of detection values, each of the plurality of detection values corresponding to at least one of a plurality of input sensors, wherein the plurality of input sensors comprises at least one of an angular position sensor, an angular velocity sensor and an angular acceleration sensor positioned to measure the rotating component; a data storage circuit structured to store specifications, system geometry, and anticipated state information for the pump and pump components, store historical steering system performance and buffer the plurality of detection values for a predetermined length of time; a bearing analysis circuit structured to analyze buffered detection values relative to specifications and anticipated state information resulting in a bearing performance parameter; a system analysis circuit structured to utilize the bearing performance and at least one of an anticipated state, historical data and a system geometry to estimate a pump performance parameter. In certain embodiments, and example system further includes wherein the pump is a water pump in a car, and/or wherein the pump is a mineral pump.

An example system for estimating a performance parameter for a drilling machine, includes: a data acquisition circuit structured to interpret a plurality of detection values, each of the plurality of detection values corresponding to at least one of a plurality of input sensors, wherein the plurality of input sensors comprises at least one of an angular position sensor, an angular velocity sensor and an angular acceleration sensor positioned to measure the rotating component; a data storage circuit structured to store specifications, system geometry, and anticipated state information for the drilling machine and drilling machine components, store historical drilling machine performance and buffer the plurality of detection values for a predetermined length of time; a bearing analysis circuit structured to analyze buffered detection values relative to specifications and anticipated state information resulting in a bearing performance parameter; and

a system analysis circuit structured to utilize the bearing performance and at least one of an anticipated state, historical data and a system geometry to estimate a performance parameter for the drilling machine. In certain further embodiments, the drilling machine is one of an oil drilling machine and a gas drilling machine.

An example system for estimating a performance parameter for a drilling machine, includes: a data acquisition circuit structured to interpret a plurality of detection values, each of the plurality of detection values corresponding to at least one of a plurality of input sensors, wherein the plurality of input sensors comprises at least one of an angular position sensor, an angular velocity sensor and an angular acceleration sensor positioned to measure the rotating component; a data storage circuit structured to store specifications, system geometry, and anticipated state information for the drilling machine and drilling machine components, store historical drilling machine performance and buffer the plurality of detection values for a predetermined length of time; a bearing analysis circuit structured to analyze buffered detection values relative to specifications and anticipated state information resulting in a bearing performance parameter; and a system analysis circuit structured to utilize bearing performance and at least one of an anticipated state, historical data and a system geometry to estimate a performance parameter for the drilling machine.

Rotating components are used throughout many different types of equipment and applications. Rotating components may include shafts, motors, rotors, stators, bearings, fins, vanes, wings, blades, fans, bearings, wheels, hubs, spokes, balls, rollers, pins, gears and the like. In embodiments, information about the health or other status or state information of or regarding a rotating component in a piece of industrial equipment or in an industrial process may be obtained by monitoring the condition of the component or various other components of the industrial equipment or industrial process and identifying torsion on the component. Monitoring may include monitoring the amplitude and phase of a sensor signal, such as one measuring attributes such as angular position, angular velocity, angular acceleration, and the like.

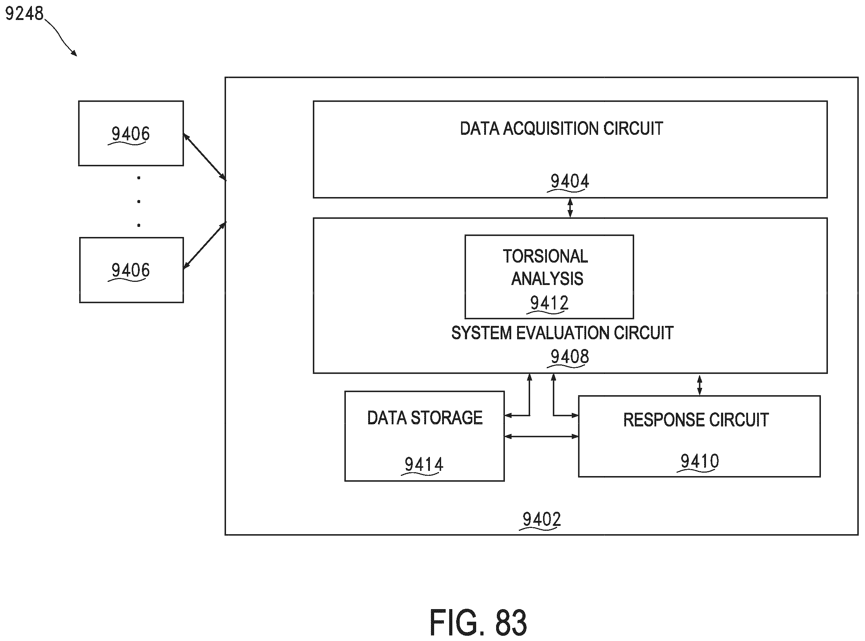

An embodiment of a data monitoring device 9400 is shown in Figure 83 and may include a plurality of sensors 9406 communicatively coupled to a controller 9402. The controller 9402 may include a data acquisition circuit 9404, a data storage circuit 9414, a system evaluation circuit 9408 and, optionally, a response circuit 9410. The system evaluation circuit 9408 may comprise a torsion analysis circuit 9412.

The plurality of sensors 9406 may be wired to ports on the data acquisition circuit 9404. The plurality of sensors 9406 may be wirelessly connected to the data acquisition circuit 9404. The data acquisition circuit 9404 may be able to access detection values corresponding to the output of at least one of the plurality of sensors 9406 where the sensors 9406 may be capturing data on different operational aspects of a bearing or piece of equipment or infrastructure.

The selection of the plurality of sensors 9406 for a data monitoring device 9400 designed to assess torsion on a component, such as a shaft, motor, rotor, stator, bearing or gear, or other component described herein, or a combination of components, such as within or comprising a drive train or piece of equipment or system, may depend on a variety of considerations such as accessibility for installing new sensors, incorporation of sensors in the initial design, anticipated operational and failure conditions, reliability of the sensors, and the like. The impact of failure may drive the extent to which a bearing or piece of equipment is monitored with more sensors and/or higher capability sensors being dedicated to systems where unexpected or undetected bearing failure would be costly or have severe consequences. To assess torsion the sensors may include, among other options, an angular position sensor and/or an angular velocity sensor and/or an angular acceleration sensor.

The system evaluation circuit 9408 may process the detection values to obtain information about one or more rotating components being monitored. The torsional analysis circuit 9412 may be structured to identify torsion in a component or system, such as based on anticipated state, historical state, system geometry and the like, such as that which is available from the data storage circuit 9414. The torsional analysis circuit 9412 may be structured to identify torsion using a variety of techniques such as amplitude, phase and frequency differences in the detection values from two linear accelerometers positioned at different locations on a shaft. The torsional analysis circuit 9412 may identify torsion using the difference in amplitude and phase between an angular accelerometer on a shaft and an angular accelerometer on a slip ring on the end of the shaft. The torsional analysis circuit 9412 may identify shear stress/elongation on a component using two strain gauges in a half bridge configuration or four strain gauges in a full bridge configuration. The torsional analysis circuit 9412 may use coder based techniques such as markers to identify the rotation of a shaft, bearing, rotor, stator, gear or other rotating component. The markers being assessed may include visual markers such as gear teeth or stripes on a shaft captured by an image sensor, light detector or the like. The markers being assessed may include magnetic components located on the rotating component and sensed by an electromagnetic pickup. The sensor may be a Hall Effect sensor.

Additional input sensors may include a thermometer, a heat flux sensor, a magnetometer, an axial load sensor, a radial load sensor, an accelerometer, a shearstress torque sensor, a twist angle sensor and the like. Twist angle may include rotational information at two positions on shaft or an angular velocity or angular acceleration at two positions on a shaft. In embodiments, the sensors may be positioned at different ends of the shaft.

The torsional analysis circuit 9412 may include one or more of a transient signal analysis circuit and/or a frequency transformation circuit and/or a frequency analysis circuit as described elsewhere herein.

In embodiments, the transitory signal analysis circuit for torsional analysis may include envelope modulation analysis, and other transitory signal analysis techniques. The system evaluation circuit 9408 may store long stream of detection values to the data storage circuit 9414. The transitory signal analysis circuit may use envelope analysis techniques on those long streams of detection values to identify transient effects (such as impacts) which may not be identified by conventional sine wave analysis (such as FFTs).

In embodiments, the frequencies of interest may include identifying energy at relation-order bandwidths for rotating equipment. The maximum order observed may comprise a function of the bandwidth of the system and the rotational speed of the component. For varying speeds (run-ups, run-downs, etc.), the minimum RPM may determine the maximum-observed order. In embodiments, there may be torsional resonance at harmonics of the forcing frequency/frequency at which a component is being driven.

In an illustrative and non-limiting example, the monitoring device may be used to collect and process sensor data to measure torsion on a component. The monitoring device may be in communication with or include a high resolution, high speed vibration sensor to collect data over an extended period of time, enough to measure multiple cycles of rotation. For gear driven equipment, the sampling resolution should be such that the number of samples taken per cycle is at least equal to the number of gear teeth driving the component. It will be understood that a lower sampling resolution may also be utilized, which may result in a lower confidence determination and/or taking data over a longer period of time to develop sufficient statistical confidence. This data may then be used in the generation of a phase reference (relative probe) or tachometer signal for a piece of equipment. This phase reference may be used to align phase data such as velocity and/or positional and/or acceleration data from multiple sensors located at different positions on a component or on different components within a system. This information may facilitate the determination of torsion for different components or the generation of an Operational Deflection Shape ("ODS"), indicating the extent of torsion on one or more components during an operational mode.

The higher resolution data stream may provide additional data for the detection of transitory signals in low speed operations. The identification of transitory signals may enable the identification of defects in a piece of equipment or component.

In an illustrative and non-limiting example, the monitoring device may be used to identify mechanical jitter for use in failure prediction models. The monitoring device may begin acquiring data when the piece of equipment starts up through ramping up to operating speed or during operation. Once at operating speed, it is anticipated that the torsional jitter should be minimal and changes in torsion during this phase may be indicative of cracks, bearing faults and the like. Additionally, known torsions may be removed from the signal to facilitate the identification of unanticipated torsions resulting from system design flaws or component wear. Having phase information associated with the data collected at operating speed may facilitate identification of a location of vibration and potential component wear. Relative phase information for a plurality of sensors located throughout a machine may facilitate the evaluation of torsion as it is propagated through a piece of equipment.

Based on the output of its various components, the system evaluation circuit 9408 may make a component life prediction, identify a component health parameter, identify a component performance parameter, and the like. The system evaluation circuit 9408 may identify unexpected torsion on a rotating component, identify strain/stress of flexure bearings, and the like. The system evaluation circuit 9408 may identify optimal operation parameters for a piece of equipment to reduce torsion and extend component life. The system evaluation circuit 9408 may identify torsion at selected operational frequencies (e.g., shaft rotation rates). Information about operational frequencies causing torsion may facilitate equipment operational balance in the future.

The system evaluation circuit 9408 may communicate with the data storage circuit 9414 to access equipment specifications, equipment geometry, bearing specifications, component materials, anticipated state information for a plurality of component types, operational history, historical detection values, and the like for use in assessing the output of its various components. The system evaluation circuit 9408 may buffer a subset of the plurality of detection values, intermediate data such as time-based detection values, time-based detection values transformed to frequency information, filtered detection values, identified frequencies of interest, and the like for a predetermined length of time. The system evaluation circuit 9408 may periodically store certain detection values in the data storage circuit 9414 to enable the tracking of component performance over time. In embodiments, based on relevant operating conditions and/or failure modes, which may occur as detection values approach one or more criteria, the system evaluation circuit 9408 may store data in the data storage circuit 9414 based on the fit of data relative to one or more criteria, such as those described throughout this disclosure. Based on one sensor input meeting or approaching specified criteria or range, the system evaluation circuit 9408 may store additional data such as RPM information, component loads, temperatures, pressures, vibrations or other sensor data of the types described throughout this disclosure in the data storage circuit 9414. The system evaluation circuit 9408 may store data in the data storage circuit at a higher data rate for greater granularity in future processing, the ability to reprocess at different sampling rates, and/or to enable diagnosing or post-processing of system information where operational data of interest is flagged, and the like.

Depending on the type of equipment, the component being measured, the environment in which the equipment is operating and the like, sensors 9406 may comprise, without limitation, one or more of the following: a displacement sensor, an angular velocity sensor, an angular accelerometer, a vibration sensor, an optical vibration sensor, a thermometer, a hygrometer, a voltage sensor, a current sensor, an accelerometer, a velocity detector, a light or electromagnetic sensor (e.g., determining temperature, composition and/or spectral analysis, and/or object position or movement), an image sensor, a structured light sensor, a laser-based image sensor, an infrared sensor, an acoustic wave sensor, a heat flux sensor, a displacement sensor, a turbidity meter, a viscosity meter, a load sensor, a tri-axial vibration sensor, an accelerometer, a tachometer, a fluid pressure meter, an air flow meter, a horsepower meter, a flow rate meter, a fluid particle detector, an acoustical sensor, a pH sensor, and the like, including, without limitation, any of the sensors described throughout this disclosure and the documents incorporated by reference.

The sensors 9406 may provide a stream of data over time that has a phase component, such as relating to angular velocity, angular acceleration or vibration, allowing for the evaluation of phase or frequency analysis of different operational aspects of a piece of equipment or an operating component. The sensors 9406 may provide a stream of data that is not conventionally phase-based, such as temperature, humidity, load, and the like. The sensors 9406 may provide a continuous or near continuous stream of data over time, periodic readings, event-driven readings, and/or readings according to a selected interval or schedule.

In an illustrative and non-limiting example, when assessing engine components it may be desirable to remove vibrations due to the timing of piston vibrations or anticipated vibrational input due to crankshaft geometry to assist in identifying other torsional forces on a component. This may assist in assessing the health of such diverse components as a water pump in a vehicle or positive displacement pumps.

In an illustrative and non-limiting example, torsional analysis and the identification of variations in torsion may assist in the identification of stick-slip in a gear or transfer system. In some cases, this may only occur once per cycle, and phase information may be as important as or more important than the amplitude of the signal in determining system state or behavior.

In an illustrative and non-limiting example, torsional analysis may assist in the identification, prediction (e.g., timing) and evaluation of lash in a drive train and the follow-on torsion resulting from a change in direction or start up, which in turn may be used for controlling a system, assessing needs for maintenance, assessing needs for balancing or otherwise re-setting components, or the like.

In an illustrative and non-limiting example, when assessing compressors, it may be desirable to remove vibrations due to the timing of piston vibrations or anticipated vibrational input associated with the techniques and geometry used for positive displacement compressors to assist in identifying other torsional forces on a component. This may assist in assessing the health of compressors in such diverse environments as air conditioning units in factories, compressors in gas handling systems in an industrial environment, compressors in oil fields, and other environments as described elsewhere herein.

In an illustrative and non-limiting example, torsional analysis may facilitate the understanding of the health and expected life of various components associated with the drive trains of vehicles, such as cranes, bulldozers, tractors, haulers, backhoes, forklifts, agricultural equipment, mining equipment, boring and drilling machines, digging machines, lifting machines, mixers (e.g., cement mixers), tank trucks, refrigeration trucks, security vehicles (e.g., including safes and similar facilities for preserving valuables), underwater vehicles, watercraft, aircraft, automobiles, trucks, trains and the like, as well as drive trains of moving apparatus, such as assembly lines, lifts, cranes, conveyors, hauling systems, and others. The evaluation of the sensor data with the model of the system geometry and operating conditions may be useful in identifying unexpected torsion and the transmission of that torsion from the motor and drive shaft, from the drive shaft to the universal joint and from the universal joint to one or more wheel axles.

In an illustrative and non-limiting example, torsional analysis may facilitate in the understanding of the health and expected life of various components associated with train/tram wheels and wheel sets. As discussed above, torsional analysis may facilitate in the identification of stick-slip between the wheels or wheel sets and the rail. The torsional analysis in view of the system geometry may facilitate the identification of torsional vibration due to stick-slip as opposed to the torsional vibration due to the driving geometry connecting the engine to the drive shaft to the wheel axle.

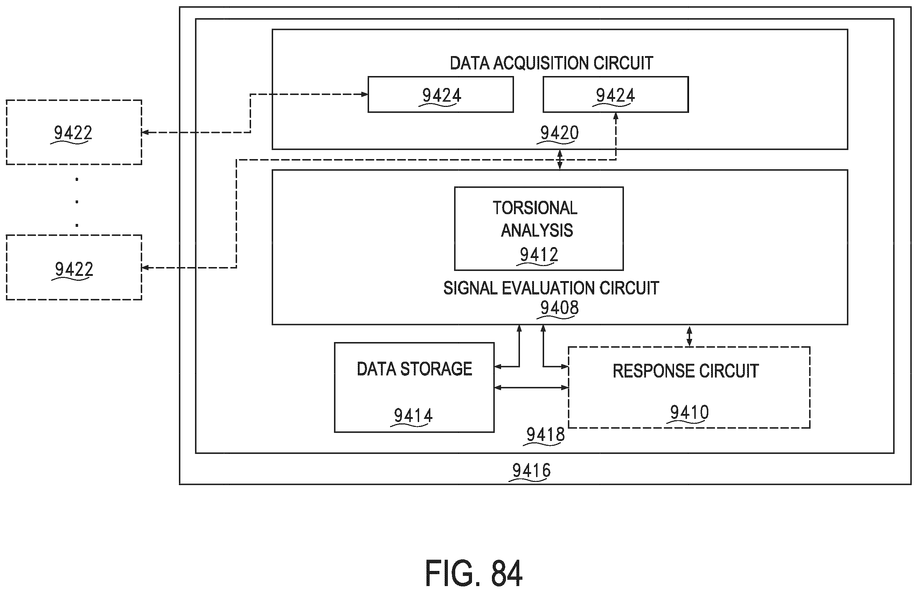

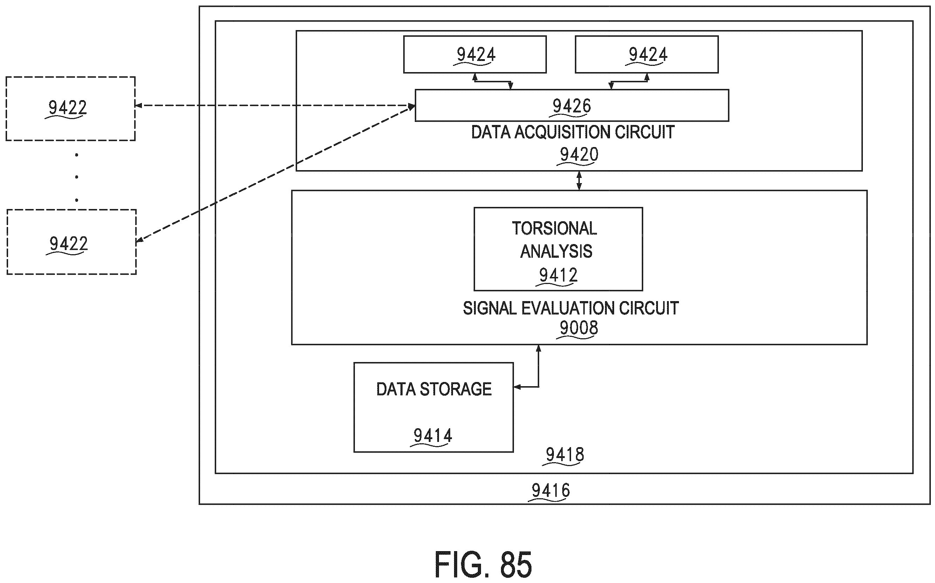

In embodiments, as illustrated in Figure 83, the sensors 9406 may be part of the data monitoring device 9400, referred to herein in some cases as a data collector, which in some cases may comprise a mobile or portable data collector. In embodiments, as illustrated in Figures 84 and 85, one or more external sensors 9422, which are not explicitly part of a monitoring device 9416 but rather are new, previously attached to or integrated into the equipment or component, may be opportunistically connected to or accessed by the monitoring device 9416. The monitoring device 9416 may include a controller 9418. The controller 9418 may include a data acquisition circuit 9420, a data storage circuit 9414, a system evaluation circuit 9408 and, optionally, a response circuit 9410. The system evaluation circuit 9408 may comprise a torsional analysis circuit 9412. The data acquisition circuit 9420 may include one or more input ports 9424. In embodiments as shown in Figure 85, a data acquisition circuit 9420 may further comprise a wireless communications circuit 9426. The one or more external sensors 9422 may be directly connected to the one or more input ports 9424 on the data acquisition circuit 9420 of the controller 9418 or may be accessed by the data acquisition circuit 9420 wirelessly using the wireless communications circuit 9426, such as by a reader, interrogator, or other wireless connection, such as over a short-distance wireless protocol. The data acquisition circuit 9420 may use the wireless communications circuit 9426 to access detection values corresponding to the one or more external sensors 9422 wirelessly or via a separate source or some combination of these methods.

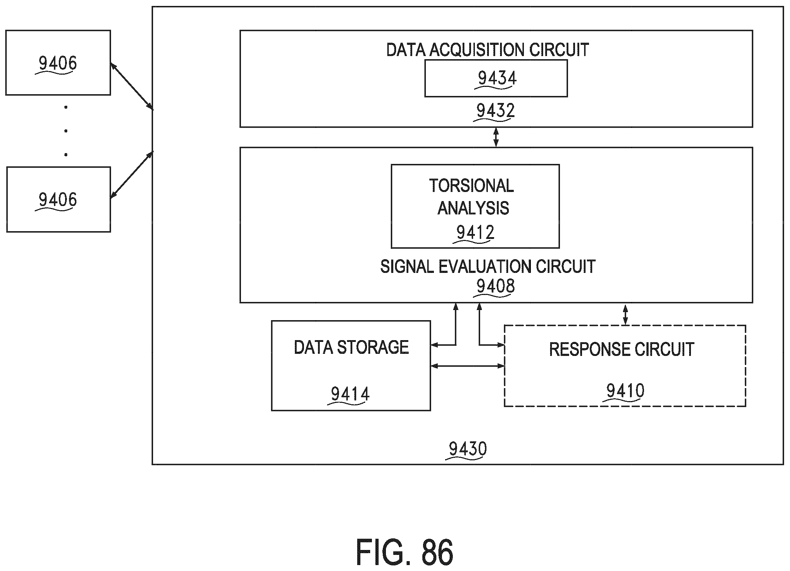

In embodiments, as illustrated in Figure 86, the data acquisition circuit 9432 may further comprise a multiplexer circuit 9434 as described elsewhere herein. Outputs from the multiplexer circuit 9434 may be utilized by the system evaluation circuit 9408. The response circuit 9410 may have the ability to turn on or off portions of the multiplexor circuit 9434. The response circuit 9410 may have the ability to control the control channels of the multiplexor circuit 9434

The response circuit 9410 may initiate actions based on a component performance parameter, a component health value, a component life prediction parameter, and the like. The response circuit 9410 may evaluate the results of the system evaluation circuit 9408 and, based on certain criteria or the output from various components of the system evaluation circuit 9408, may initiate an action. The criteria may include identification of torsion on a component by the torsional analysis circuit. The criteria may include a sensor's detection values at certain frequencies or phases relative to a timer signal where the frequencies or phases of interest may be based on the equipment geometry, equipment control schemes, system input, historical data, current operating conditions, and/or an anticipated response. The criteria may include a sensor's detection values at certain frequencies or phases relative to detection values of a second sensor. The criteria may include signal strength at certain resonant frequencies/harmonics relative to detection values associated with a system tachometer or anticipated based on equipment geometry and operation conditions. Criteria may include a predetermined peak value for a detection value from a specific sensor, a cumulative value of a sensor's corresponding detection value over time, a change in peak value, a rate of change in a peak value, and/or an accumulated value (e.g., a time spent above/below a threshold value, a weighted time spent above/below one or more threshold values, and/or an area of the detected value above/below one or more threshold values). The criteria may comprise combinations of data from different sensors such as relative values, relative changes in value, relative rates of change in value, relative values over time, and the like. The relative criteria may change with other data or information such as process stage, type of product being processed, type of equipment, ambient temperature and humidity, external vibrations from other equipment, and the like. The relative criteria may be reflected in one or more calculated statistics or metrics (including ones generated by further calculations on multiple criteria or statistics), which in turn may be used for processing (such as on board a data collector or by an external system), such as to be provided as an input to one or more of the machine learning capabilities described in this disclosure, to a control system (which may be on board a data collector or remote, such as to control selection of data inputs, multiplexing of sensor data, storage, or the like), or as a data element that is an input to another system, such as a data stream or data package that may be available to a data marketplace, a SCADA system, a remote control system, a maintenance system, an analytic system, or other system.

Certain embodiments are described herein as detected values exceeding thresholds or predetermined values, but detected values may also fall below thresholds or predetermined values - for example where an amount of change in the detected value is expected to occur, but detected values indicate that the change may not have occurred. Except where the context clearly indicates otherwise, any description herein describing a determination of a value above a threshold and/or exceeding a predetermined or expected value is understood to include determination of a value below a threshold and/or falling below a predetermined or expected value.

The predetermined acceptable range may be based on anticipated torsion based on equipment geometry, the geometry of a transfer system, an equipment configuration or control scheme, such as a piston firing sequence, and the like. The predetermined acceptable range may also be based on historical performance or predicted performance, such as long term analysis of signals and performance both from the past run and from the past several runs. The predetermined acceptable range may also be based on historical performance or predicted performance, or based on long term analysis of signals and performance across a plurality of similar equipment and components (both within a specific environment, within an individual company, within multiple companies in the same industry and across industries). The predetermined acceptable range may also be based on a correlation of sensor data with actual equipment and component performance.

In some embodiments, an alert may be issued based on some of the criteria discussed above. In embodiments, the relative criteria for an alarm may change with other data or information, such as process stage, type of product being processed on equipment, ambient temperature and humidity, external vibrations from other equipment and the like. In an illustrative and non-limiting example, the response circuit 9410 may initiate an alert if a torsion in a component across a plurality of components exceeds a predetermined maximum value, if there is a change or rate of change that exceeds a predetermined acceptable range, and/or if an accumulated value based on torsion amplitude and/or frequency exceeds a threshold.

In embodiments, response circuit 9410 may cause the data acquisition circuit 9432 to enable or disable the processing of detection values corresponding to certain sensors based on some of the criteria discussed above. This may include switching to sensors having different response rates, sensitivity, ranges, and the like; accessing new sensors or types of sensors, and the like. Switching may be undertaken based on a model, a set of rules, or the like. In embodiments, switching may be under control of a machine learning system, such that switching is controlled based on one or more metrics of success, combined with input data, over a set of trials, which may occur under supervision of a human supervisor or under control of an automated system. Switching may involve switching from one input port to another (such as to switch from one sensor to another). Switching may involve altering the multiplexing of data, such as combining different streams under different circumstances. Switching may involve activating a system to obtain additional data, such as moving a mobile system (such as a robotic or drone system), to a location where different or additional data is available (such as positioning an image sensor for a different view or positioning a sonar sensor for a different direction of collection) or to a location where different sensors can be accessed (such as moving a collector to connect up to a sensor that is disposed at a location in an environment by a wired or wireless connection). This switching may be implemented by changing the control signals for a multiplexor circuit 9434 and/or by turning on or off certain input sections of the multiplexor circuit 9434.

The response circuit 9410 may calculate transmission effectiveness based on differences between a measured and theoretical angular position and velocity of an output shaft after accounting for the gear ration and any phase differential between input and output.

The response circuit 9410 may identify equipment or components that are due for maintenance. The response circuit 9410 may make recommendations for the replacement of certain sensors in the future with sensors having different response rates, sensitivity, ranges, and the like. The response circuit 9410 may recommend design alterations for future embodiments of the component, the piece of equipment, the operating conditions, the process, and the like.

In embodiments, the response circuit 9410 may recommend maintenance at an upcoming process stop or initiate a maintenance call. The response circuit 9410 may recommend changes in process or operating parameters to remotely balance the piece of equipment. In embodiments, the response circuit 9410 may implement or recommend process changes - for example to lower the utilization of a component that is near a maintenance interval, operating off-nominally, or failed for purpose but still at least partially operational, to change the operating speed of a component (such as to put it in a lower-demand mode), to initiate amelioration of an issue (such as to signal for additional lubrication of a roller bearing set, or to signal for an alignment process for a system that is out of balance), and the like.

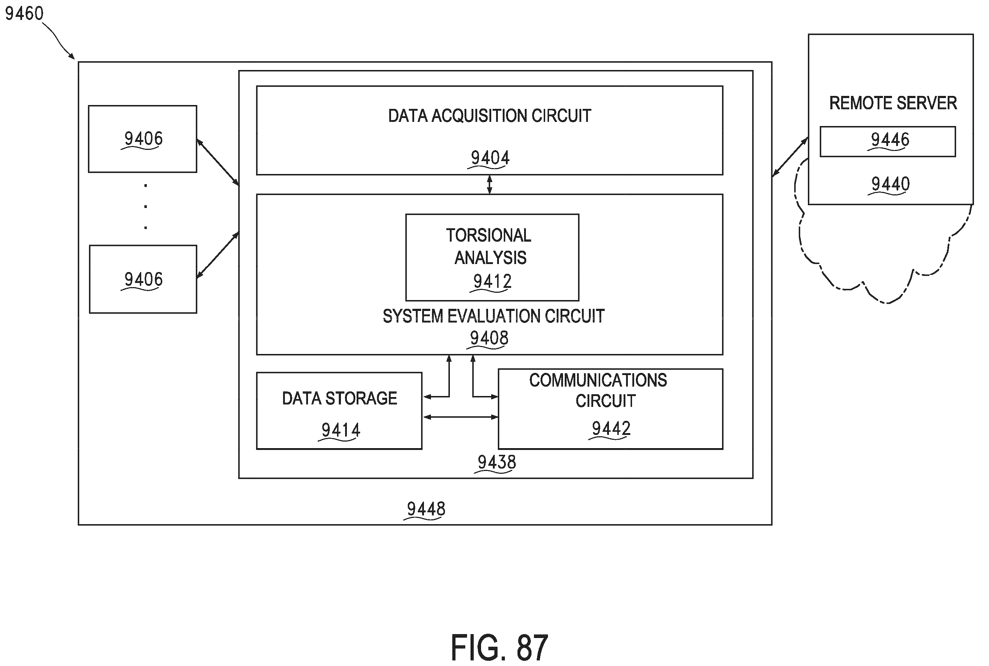

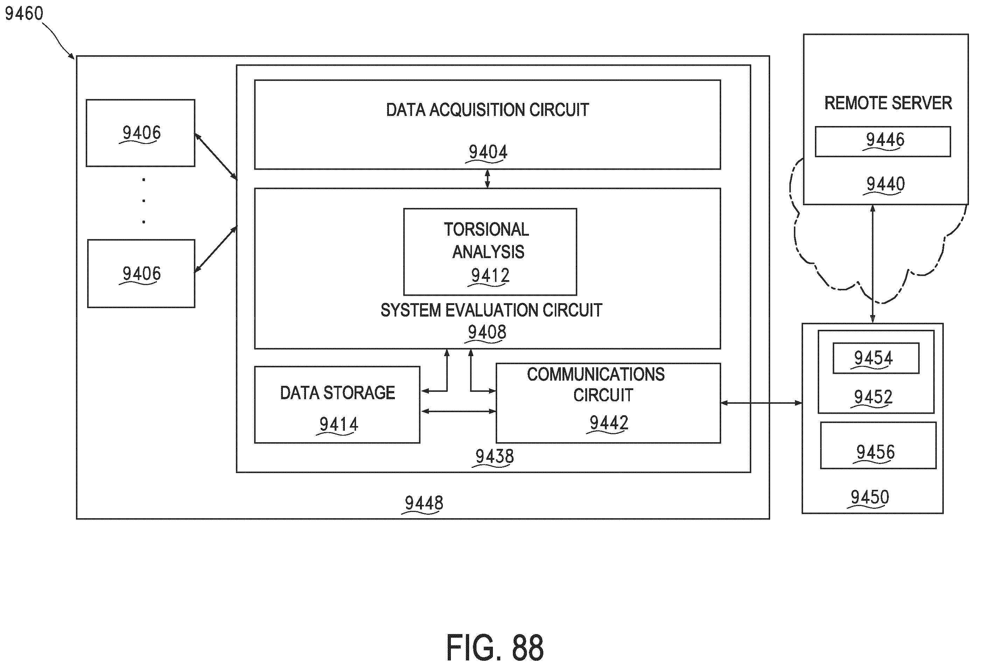

In embodiments as shown in Figures 87, 88, 89, and 90, a data monitoring system 9460 may include at least one data monitoring device 9448. At least one data monitoring device 9448 may include sensors 9406 and a controller 9438 comprising a data acquisition circuit 9404, a system evaluation circuit 9408, a data storage circuit 9414, and a communications circuit 9442. The system evaluation circuit 9408 may include a torsional analysis circuit 9412. There may also be an optional response circuit as described above and elsewhere herein. The system evaluation circuit 9408 may periodically share data with the communication circuit 9442 for transmittal to the remote server 9440 to enable the tracking of component and equipment performance over time and under varying conditions by a monitoring application 9446. Because relevant operating conditions and/or failure modes may occur as sensor values approach one or more criteria, the system evaluation circuit 9408 may share data with the communication circuit 9462 for transmittal to the remote server 9440 based on the fit of data relative to one or more criteria. Based on one sensor input meeting or approaching specified criteria or range, the system evaluation circuit 9408 may share additional data such as RPMs, component loads, temperatures, pressures, vibrations, and the like for transmittal. The system evaluation circuit 9408 may share data at a higher data rate for transmittal to enable greater granularity in processing on the remote server. In embodiments, as shown in Figure 87, the communications circuit 9442 may communicate data directly to a remote server 9440. In embodiments, as shown in Figure 88, the communications circuit 9442 may communicate data to an intermediate computer 9450 which may include a processor 9452 running an operating system 9454 and a data storage circuit 9456.

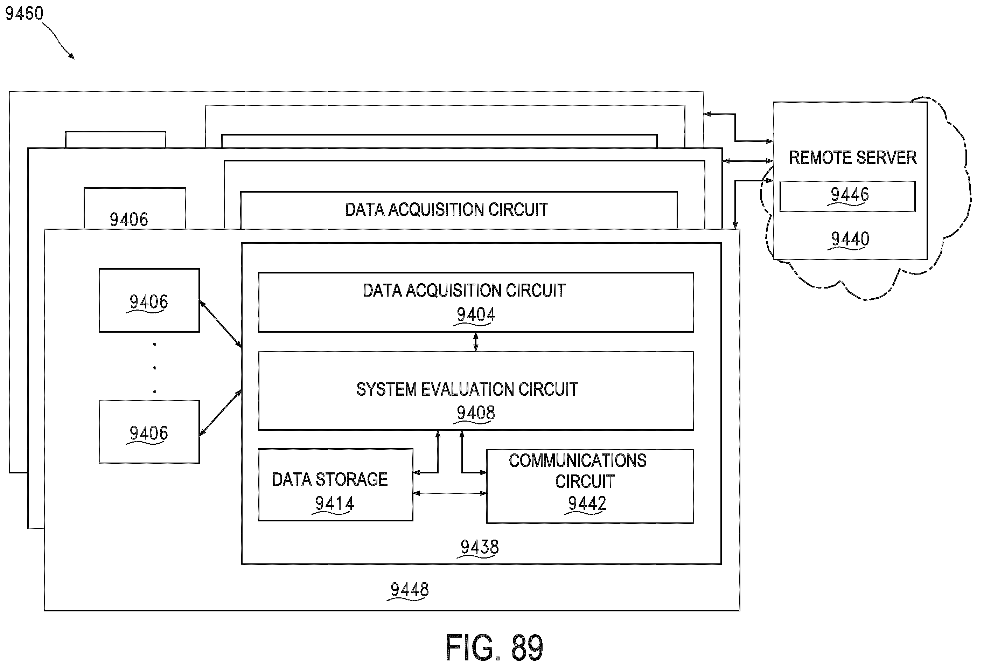

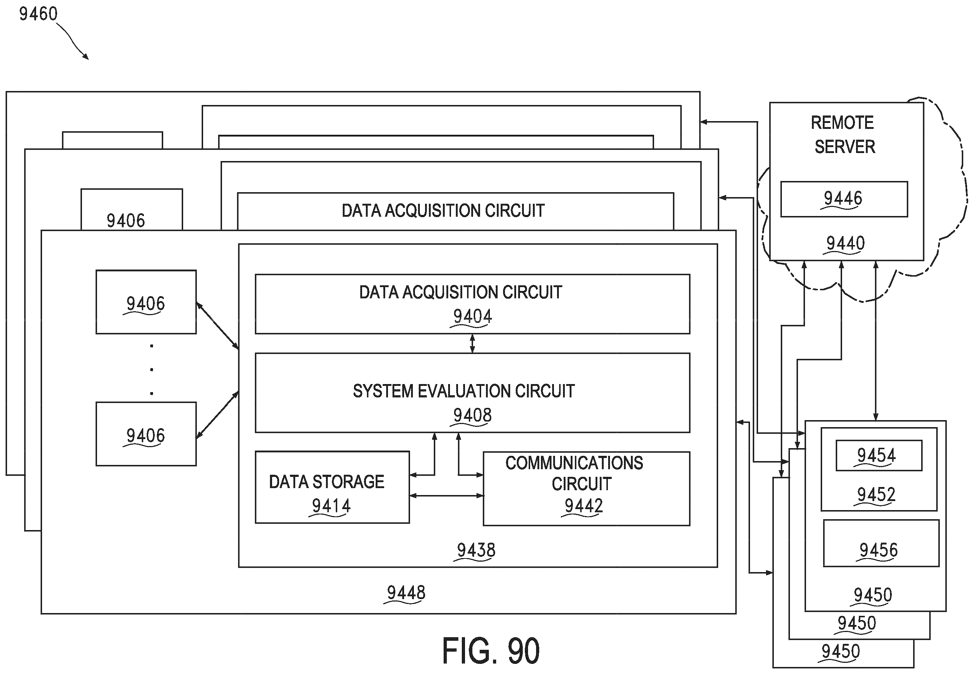

In embodiments, as illustrated in Figures 89 and 90, a data collection system 9458 may have a plurality of monitoring devices 9448 collecting data on multiple components in a single piece of equipment, collecting data on the same component across a plurality of pieces of equipment (both the same and different types of equipment) in the same facility as well as collecting data from monitoring devices in multiple facilities. A monitoring application 9446 on a remote server 9440 may receive and store one or more of detection values, timing signals and data coming from a plurality of the various monitoring devices 9448. In embodiments, as shown in Figure 89, the communications circuit 9442 may communicate data directly to a remote server 9440. In embodiments, as shown in Figure 90, the communications circuit 9442 may communicate data to an intermediate computer 9450, which may include a processor 9452 running an operating system 9454 and a data storage circuit 9456. There may be an individual intermediate computer 9450 associated with each monitoring device 9264 or an individual intermediate computer 9450 may be associated with a plurality of monitoring devices 9448 where the intermediate computer 9450 may collect data from a plurality of data monitoring devices and send the cumulative data to the remote server 9440.

The monitoring application 9446 may select subsets of detection values, timing signals, data, product performance and the like to be jointly analyzed. Subsets for analysis may be selected based on component type, component materials, or a single type of equipment in which a component is operating. Subsets for analysis may be selected or grouped based on common operating conditions or operational history such as size of load, operational condition (e.g., intermittent, continuous), operating speed or tachometer, common ambient environmental conditions such as humidity, temperature, air or fluid particulate, and the like. Subsets for analysis may be selected based on common anticipated state information. Subsets for analysis may be selected based on the effects of other nearby equipment such as nearby machines rotating at similar frequencies, nearby equipment producing electromagnetic fields, nearby equipment producing heat, nearby equipment inducing movement or vibration, nearby equipment emitting vapors, chemicals or particulates, or other potentially interfering or intervening effects.

The monitoring application 9446 may analyze a selected subset. In an illustrative example, data from a single component may be analyzed over different time periods such as one operating cycle, cycle to cycle comparisons, trends over several operating cycles/time such as a month, a year, the life of the component or the like. Data from multiple components of the same type may also be analyzed over different time periods. Trends in the data such as changes in frequency or amplitude may be correlated with failure and maintenance records associated with the same component or piece of equipment. Trends in the data such as changing rates of change associated with start-up or different points in the process may be identified. Additional data may be introduced into the analysis such as output product quality, output quantity (such as per unit of time), indicated success or failure of a process, and the like. Correlation of trends and values for different types of data may be analyzed to identify those parameters whose short-term analysis might provide the best prediction regarding expected performance. The analysis may identify model improvements to the model for anticipated state information, recommendations around sensors to be used, positioning of sensors and the like. The analysis may identify additional data to collect and store. The analysis may identify recommendations regarding needed maintenance and repair and/or the scheduling of preventative maintenance. The analysis may identify recommendations around purchasing replacement components and the timing of the replacement of the components. The analysis may identify recommendations regarding future geometry changes to reduce torsion on components. The analysis may result in warning regarding dangers of catastrophic failure conditions. This information may be transmitted back to the monitoring device to update types of data collected and analyzed locally or to influence the design of future monitoring devices.

In embodiments, the monitoring application 9446 may have access to equipment specifications, equipment geometry, component specifications, component materials, anticipated state information for a plurality of component types, operational history, historical detection values, component life models and the like for use analyzing the selected subset using rule-based or model-based analysis. In embodiments, the monitoring application 9446 may feed a neural net with the selected subset to learn to recognize various operating states, health states (e.g., lifetime predictions) and fault states utilizing deep learning techniques. In embodiments, a hybrid of the two techniques (model-based learning and deep learning) may be used.

In an illustrative and non-limiting example, the health of the rotating components on conveyors and lifters in an assembly line may be monitored using the torsional analysis techniques, data monitoring devices and data collection systems described herein.

In an illustrative and non-limiting example, the health the rotating components in water pumps on industrial vehicles may be monitored using the torsional analysis techniques, data monitoring devices and data collection systems described herein.

In an illustrative and non-limiting example, the health of rotating components in compressors in gas handling systems may be monitored using the data monitoring devices and data collection systems described herein.

In an illustrative and non-limiting example, the health of the rotating components in compressors situated in the gas and oil fields may be monitored using the data monitoring devices and data collection systems described herein.

In an illustrative and non-limiting example, the health of the rotating components in factory air conditioning units may be evaluated using the techniques, data monitoring devices and data collection systems described herein.

In an illustrative and non-limiting example, the health of the rotating components in factory mineral pumps may be evaluated using the techniques, data monitoring devices and data collection systems described herein.

In an illustrative and non-limiting example, the health of the rotating components such as shafts, bearings, and gears in drilling machines and screw drivers situated in the oil and gas fields may be evaluated using the torsional analysis techniques, data monitoring devices and data collection systems described herein.

In an illustrative and non-limiting example, the health of rotating components such as shafts, bearings, gears, and rotors of motors situated in the oil and gas fields may be evaluated using the torsional analysis techniques, data monitoring devices and data collection systems described herein.

In an illustrative and non-limiting example, the health of rotating components such as blades, screws and other components of pumps situated in the oil and gas fields may be evaluated using the torsional analysis techniques, data monitoring devices and data collection systems described herein.

In an illustrative and non-limiting example, the health of rotating components such as shafts, bearings, motors, rotors, stators, gears, and other components of vibrating conveyors situated in the oil and gas fields may be evaluated using the torsional analysis techniques, data monitoring devices and data collection systems described herein.

In an illustrative and non-limiting example, the health of rotating components such as bearings, shafts, motors, rotors, stators, gears, and other components of mixers situated in the oil and gas fields may be evaluated using the torsional analysis techniques, data monitoring devices and data collection systems described herein.

In an illustrative and non-limiting example, the health of rotating components such as bearings, shafts, motors, rotors, stators, gears, and other components of centrifuges situated in oil and gas refineries may be evaluated using the torsional analysis techniques, data monitoring devices and data collection systems described herein.

In an illustrative and non-limiting example, the health of rotating components such as bearings, shafts, motors, rotors, stators, gears, and other components of refining tanks situated in oil and gas refineries may be evaluated using the torsional analysis techniques, data monitoring devices and data collection systems described herein.

In an illustrative and non-limiting example, the health of rotating components such as bearings, shafts, motors, rotors, stators, gears, and other components of rotating tank/mixer agitators to promote chemical reactions deployed in chemical and pharmaceutical production lines may be evaluated using the torsional analysis techniques, data monitoring devices and data collection systems described herein.

In an illustrative and non-limiting example, the health of rotating components such as bearings, shafts, motors, rotors, stators, gears, and other components of mechanical/rotating agitators to promote chemical reactions deployed in chemical and pharmaceutical production lines may be evaluated using the torsional analysis techniques, data monitoring devices and data collection systems described herein.

In an illustrative and non-limiting example, the health of rotating components such as bearings, shafts, motors, rotors, stators, gears, and other components of propeller agitators to promote chemical reactions deployed in chemical and pharmaceutical production lines may be evaluated using the torsional analysis techniques, data monitoring devices and data collection systems described herein.

In an illustrative and non-limiting example, the health of bearings and associated shafts, motors, rotors, stators, gears, and other components of vehicle steering mechanisms may be evaluated using the torsional analysis techniques, data monitoring devices and data collection systems described herein.

In an illustrative and non-limiting example, the health of bearings and associated shafts, motors, rotors, stators, gears, and other components of vehicle engines may be evaluated using the torsional analysis techniques, data monitoring devices and data collection systems described herein.

In embodiments, a monitoring device for estimating an anticipated lifetime of a rotating component in an industrial machine may comprise a data acquisition circuit structured to interpret a plurality of detection values, each of the plurality of detection values corresponding to at least one of a plurality of input sensors, wherein the plurality of input sensors comprises at least one of an angular position sensor, an angular velocity sensor and an angular acceleration sensor positioned to measure the rotating component; a data storage circuit structured to store specifications, system geometry, and anticipated state information for a plurality of rotating components, store historical component performance and buffer the plurality of detection values for a predetermined length of time; and a torsional analysis circuit structured to utilize transitory signal analysis to analyze the buffered detection values relative to the rotating component specifications and anticipated state information resulting in the identification of torsional vibration; and a system analysis circuit structured to utilize the identified torsional vibration and at least one of an anticipated state, historical data and a system geometry to identify an anticipated lifetime of the rotating component. In embodiments, the monitoring device may further comprise a response circuit to perform at least one operation in response to the anticipated lifetime of the rotating component, wherein the plurality of input sensors includes at least two sensors selected from the group consisting of a temperature sensor, a load sensor, an optical vibration sensor, an acoustic wave sensor, a heat flux sensor, an infrared sensor, an accelerometer, a tri-axial vibration sensor, a tachometer, and the like. At least one operation may comprise issuing at least one of an alert and a warning, storing additional data in the data storage circuit, ordering a replacement of the rotating component, scheduling replacement of the rotating component, recommending alternatives to the rotating component, and the like.

In embodiments, a monitoring device for evaluating the health of a rotating component in an industrial machine may comprise a data acquisition circuit structured to interpret a plurality of detection values, each of the plurality of detection values corresponding to at least one of a plurality of input sensors, wherein the plurality of input sensors comprises at least one of an angular position sensor, an angular velocity sensor and an angular acceleration sensor positioned to measure the rotating component; a data storage circuit structured to store specifications, system geometry, and anticipated state information for a plurality of rotating components, store historical component performance and buffer the plurality of detection values for a predetermined length of time; and a torsional analysis circuit structured to utilize transitory signal analysis to analyze the buffered detection values relative to the rotating component specifications and anticipated state information resulting in the identification of torsional vibration; and a system analysis circuit structured to utilize the identified torsional vibration and at least one of an anticipated state, historical data and a system geometry to identify the health of the rotating component. In embodiments, the monitoring device may further comprise a response circuit to perform at least one operation in response to the health of the rotating component. The plurality of input sensors may include at least two sensors selected from the group consisting of a temperature sensor, a load sensor, an optical vibration sensor, an acoustic wave sensor, a heat flux sensor, an infrared sensor, an accelerometer, a tri-axial vibration sensor a tachometer, and the like. The monitoring device may issue an alert and an alarm, such as the at least one operation storing additional data in the data storage circuit, ordering a replacement of the rotating component, scheduling replacement of the rotating component, recommending alternatives to the rotating component, and the like.

In embodiments, a monitoring device for evaluating the operational state of a rotating component in an industrial machine may comprise a data acquisition circuit structured to interpret a plurality of detection values, each of the plurality of detection values corresponding to at least one of a plurality of input sensors, wherein the plurality of input sensors comprises at least one of an angular position sensor, an angular velocity sensor and an angular acceleration sensor positioned to measure the rotating component; a data storage circuit structured to store specifications, system geometry, and anticipated state information for a plurality of rotating components, store historical component performance and buffer the plurality of detection values for a predetermined length of time; and a torsional analysis circuit structured to utilize transitory signal analysis to analyze the buffered detection values relative to the rotating component specifications and anticipated state information resulting in the identification of torsional vibration; and a system analysis circuit structured to utilize the identified torsional vibration and at least one of an anticipated state, historical data and a system geometry to identify the operational state of the rotating component. In embodiments, the operational state may be a current or future operational state. A response circuit may perform at least one operation in response to the operational state of the rotating component. The at least one operation may store additional data in the data storage circuit, order a replacement of the rotating component, schedule a replacement of the rotating component, recommending alternatives to the rotating component, and the like.

In embodiments, s monitoring device for evaluating the operational state of a rotating component in an industrial machine may include a data acquisition circuit structured to interpret a plurality of detection values, each of the plurality of detection values corresponding to at least one of a plurality of input sensors, wherein the plurality of input sensors comprises at least one of an angular position sensor, an angular velocity sensor and an angular acceleration sensor positioned to measure the rotating component; a data storage circuit structured to store specifications, system geometry, and anticipated state information for a plurality of rotating components, store historical component performance and buffer the plurality of detection values for a predetermined length of time; and a torsional analysis circuit structured to utilize transitory signal analysis to analyze the buffered detection values relative to the rotating component specifications and anticipated state information resulting in the identification of torsional vibration; and a system analysis circuit structured to utilize the identified torsional vibration and at least one of an anticipated state, historical data and a system geometry to identify the operational state of the rotating component, wherein the data acquisition circuit comprises a multiplexer circuit whereby alternative combinations of the detection values may be selected based on at least one of user input, a detected state and a selected operating parameter for a machine. The operational state may be a current or future operational state. The at least one operation may enable or disable one or more portions of the multiplexer circuit, or altering the multiplexer control lines. The data acquisition circuit may include at least two multiplexer circuits and the at least one operation comprises changing connections between the at least two multiplexer circuits.

In embodiments, a system for evaluating an operational state a rotating component in a piece of equipment may comprise a data acquisition circuit structured to interpret a plurality of detection values, each of the plurality of detection values corresponding to at least one of a plurality of input sensors, wherein the plurality of input sensors comprises at least one of an angular position sensor, an angular velocity sensor and an angular acceleration sensor positioned to measure the rotating component; a data storage circuit structured to store specifications, system geometry, and anticipated state information for a plurality of rotating components, store historical component performance and buffer the plurality of detection values for a predetermined length of time; and a torsional analysis circuit structured to utilize transitory signal analysis to analyze the buffered detection values relative to the rotating component specifications and anticipated state information resulting in identification of any torsional vibration; a system analysis circuit structured to utilize the torsional vibration and at least one of an anticipated state, historical data and a system geometry to identify the operational state of the rotating component; and a communication module enabled to communicate the operational state of the rotating component, the torsional vibration and detection values to a remote server, wherein the detection values communicated are based partly on the operational state of the rotating component and the torsional vibration; and a monitoring application on the remote server structured to receive, store and jointly analyze a subset of the detection values from the monitoring devices. The analysis of the subset of detection values may include transitory signal analysis to identify the presence of high frequency torsional vibration. The monitoring application may be structured to subset detection values based on one of: operational state, torsional vibration, type of the rotating component, operational conditions under which detection values were measured, and type or equipment. The analysis of the subset of detection values may include feeding a neural net with the subset of detection values and supplemental information to learn to recognize various operating states, health states and fault states utilizing deep learning techniques. The supplemental information may include one of component specification, component performance, equipment specification, equipment performance, maintenance records, repair records an anticipated state model, and the like. The operational state may include a current or future operational state. The monitoring device may include a response circuit to perform at least one operation in response to the operational state of the rotating component. The at least one operation may include storing additional data in the data storage circuit.

In embodiments, a system for evaluating the health of a rotating component in a piece of equipment may comprise a data acquisition circuit structured to interpret a plurality of detection values, each of the plurality of detection values corresponding to at least one of a plurality of input sensors, wherein the plurality of input sensors comprises at least one of: an angular position sensor, an angular velocity sensor and an angular acceleration sensor positioned to measure the rotating component; a data storage circuit structured to store specifications, system geometry, and anticipated state information for a plurality of rotating components, store historical component performance and buffer the plurality of detection values for a predetermined length of time; and a torsional analysis circuit structured to utilize transitory signal analysis to analyze the buffered detection values relative to the rotating component specifications and anticipated state information resulting in identification of torsional vibration; a system analysis circuit structured to utilize the torsional vibration and at least one of an anticipated state, historical data and a system geometry to identify the health of the rotating component; and a communication module enabled to communicate the health of the rotating component, the torsional vibrations and detection values to a remote server, wherein the detection values communicated are based partly on the health of the rotating component and the torsional vibration; and a monitoring application on the remote server structured to receive, store and jointly analyze a subset of the detection values from the monitoring devices. In embodiments, the analysis of the subset of detection values may include transitory signal analysis to identify the presence of high frequency torsional vibration. The monitoring application may be structured to subset detection values. The analysis of the subset of detection values may include feeding a neural net with the subset of detection values and supplemental information to learn to recognize various operating states, health states and fault states utilizing deep learning techniques. The supplemental information may include one of component specification, component performance, equipment specification, equipment performance, maintenance records, repair records and an anticipated state model. The operational state may be a current or future operational state. A response circuit may perform at least one operation in response to the health of the rotating component.

In embodiments, a system for estimating an anticipated lifetime of a rotating component in a piece of equipment may comprise a data acquisition circuit structured to interpret a plurality of detection values, each of the plurality of detection values corresponding to at least one of a plurality of input sensors, wherein the plurality of input sensors comprises at least one of an angular position sensor, an angular velocity sensor and an angular acceleration sensor positioned to measure the rotating component; a data storage circuit structured to store specifications, system geometry, and anticipated state information for a plurality of rotating components, store historical component performance and buffer the plurality of detection values for a predetermined length of time; and a torsional analysis circuit structured to utilize transitory signal analysis to analyze the buffered detection values relative to the rotating component specifications and anticipated state information resulting in identification of torsional vibration; a system analysis circuit structured to utilize the torsional vibration and at least one of an anticipated state, historical data and a system geometry to identify an anticipated life the rotating component; and a communication module enabled to communicate the anticipated life of the rotating component, the torsional vibrations and detection values to a remote server, wherein the detection values communicated are based partly on the anticipated life of the rotating component and the torsional vibration; and a monitoring application on the remote server structured to receive, store and jointly analyze a subset of the detection values from the monitoring devices. In embodiments, the analysis of the subset of detection values may include transitory signal analysis to identify the presence of high frequency torsional vibration. The monitoring application may be structured to subset detection values based on one of anticipated life of the rotating component, torsional vibration, type of the rotating component, operational conditions under which detection values were measured, and type of equipment. The analysis of the subset of detection values may include feeding a neural net with the subset of detection values and supplemental information to learn to recognize various operating states, health states, life expectancies and fault states utilizing deep learning techniques. The supplemental information may include one of component specification, component performance, equipment specification, equipment performance, maintenance records, repair records and an anticipated state model. The monitoring device may include a response circuit to perform at least one operation in response to the anticipated life of the rotating component. The at least one operation may include one of ordering a replacement of the rotating component, scheduling replacement of the rotating component, and recommending alternatives to the rotating component.

In embodiments, a system for evaluating the health of a variable frequency motor in an industrial environment may comprise a data acquisition circuit structured to interpret a plurality of detection values, each of the plurality of detection values corresponding to at least one of a plurality of input sensors, wherein the plurality of input sensors comprises at least one of an angular position sensor, an angular velocity sensor and an angular acceleration sensor positioned to measure the rotating component; a data storage circuit structured to store specifications, system geometry, and anticipated state information for a plurality of rotating components, store historical component performance and buffer the plurality of detection values for a predetermined length of time; and a torsional analysis circuit structured to utilize transitory signal analysis to analyze the buffered detection values relative to the rotating component specifications and anticipated state information resulting in identification of torsional vibration; a system analysis circuit structured to utilize the torsional vibration and at least one of an anticipated state, historical data and a system geometry to identify a motor health parameter; and a communication module enabled to communicate the motor health parameter, the torsional vibrations and detection values to a remote server, wherein the detection values communicated are based partly on the motor health parameter and the torsional vibration; and a monitoring application on the remote server structured to receive, store and jointly analyze a subset of the detection values from the monitoring devices.

In embodiments, a system for data collection, processing, and torsional analysis of a rotating component in an industrial environment may comprise a data acquisition circuit structured to interpret a plurality of detection values, each of the plurality of detection values corresponding to at least one of a plurality of input sensors, wherein the plurality of input sensors comprises at least one of an angular position sensor, an angular velocity sensor and an angular acceleration sensor positioned to measure the rotating component; a streaming circuit for streaming at least a subset of the acquired detection values to a remote learning system; and a remote learning system including a torsional analysis circuit structured to analyze the detection values relative to a machine-based understanding of the state of the at least one rotating component. The machine-based understanding may be developed based on a model of the rotating component that determines a state of the at least one rotating component based at least in part on the relationship of the behavior of the rotating component to an operating frequency of a component of the industrial machine. The state of the at least one rotating component may be at least one of an operating state, a health state, a predicted lifetime state and a fault state. The machine-based understanding may be developed based by providing inputs to a deep learning machine, wherein the inputs comprise a plurality of streams of detection values for a plurality of rotating components and a plurality of measured state values for the plurality of rotating components. The state of the at least one rotating component may be at least one of an operating state, a health state, a predicted lifetime state and a fault state.

In embodiments, information about the health or other status or state information of or regarding a component or piece of industrial equipment may be obtained by monitoring the condition of various components throughout a process. Monitoring may include monitoring the amplitude of a sensor signal measuring attributes such as temperature, humidity, acceleration, displacement and the like. An embodiment of a data monitoring device 9700 is shown in Figure 91 and may include a plurality of sensors 9706 communicatively coupled to a controller 9702. The controller 9702 may include a data acquisition circuit 9704, a signal evaluation circuit 9708, a data storage circuit 9716 and a response circuit 9710. The signal evaluation circuit 9708 may comprise a circuit for detecting a fault in one or more sensors, or a set of sensors, such as an overload detection circuit 9712, a sensor fault detection circuit 9714, or both. Additionally, the signal evaluation circuit 9708 may optionally comprise one or more of a peak detection circuit, a phase detection circuit, a bandpass filter circuit, a frequency transformation circuit, a frequency analysis circuit, a phase lock loop circuit, a torsional analysis circuit, a bearing analysis circuit, and the like.

The plurality of sensors 9706 may be wired to ports on the data acquisition circuit 9704. The plurality of sensors 9706 may be wirelessly connected to the data acquisition circuit 9704. The data acquisition circuit 9704 may be able to access detection values corresponding to the output of at least one of the plurality of sensors 9706 where the sensors 9706 may be capturing data on different operational aspects of a piece of equipment or an operating component.

The selection of the plurality of sensors 9706 for a data monitoring device 9700 designed for a specific component or piece of equipment may depend on a variety of considerations such as accessibility for installing new sensors, incorporation of sensors in the initial design, anticipated operational and failure conditions, resolution desired at various positions in a process or plant, reliability of the sensors, and the like. The impact of a failure, time response of a failure (e.g., warning time and/or off-nominal modes occurring before failure), likelihood of failure, and/or sensitivity required and/or difficulty to detection failure conditions may drive the extent to which a component or piece of equipment is monitored with more sensors and/or higher capability sensors being dedicated to systems where unexpected or undetected failure would be costly or have severe consequences.

Depending on the type of equipment, the component being measured, the environment in which the equipment is operating and the like, sensors 9706 may comprise, without limitation, one or more of the following: a vibration sensor, a thermometer, a hygrometer, a voltage sensor and/or a current sensor (for the component and/or other sensors measuring the component), an accelerometer, a velocity detector, a light or electromagnetic sensor (e.g., determining temperature, composition and/or spectral analysis, and/or object position or movement), an image sensor, a structured light sensor, a laser-based image sensor, a thermal imager, an acoustic wave sensor, a displacement sensor, a turbidity meter, a viscosity meter, a axial load sensor, a radial load sensor, a tri-axial sensor, an accelerometer, a speedometer, a tachometer, a fluid pressure meter, an air flow meter, a horsepower meter, a flow rate meter, a fluid particle detector, an optical (laser) particle counter, an ultrasonic sensor, an acoustical sensor, a heat flux sensor, a galvanic sensor, a magnetometer, a pH sensor, and the like, including, without limitation, any of the sensors described throughout this disclosure and the documents incorporated by reference.

The sensors 9706 may provide a stream of data over time that has a phase component, such as relating to acceleration or vibration, allowing for the evaluation of phase or frequency analysis of different operational aspects of a piece of equipment or an operating component. The sensors 9706 may provide a stream of data that is not conventionally phase-based, such as temperature, humidity, load, and the like. The sensors 9706 may provide a continuous or near continuous stream of data over time, periodic readings, event-driven readings, and/or readings according to a selected interval or schedule.

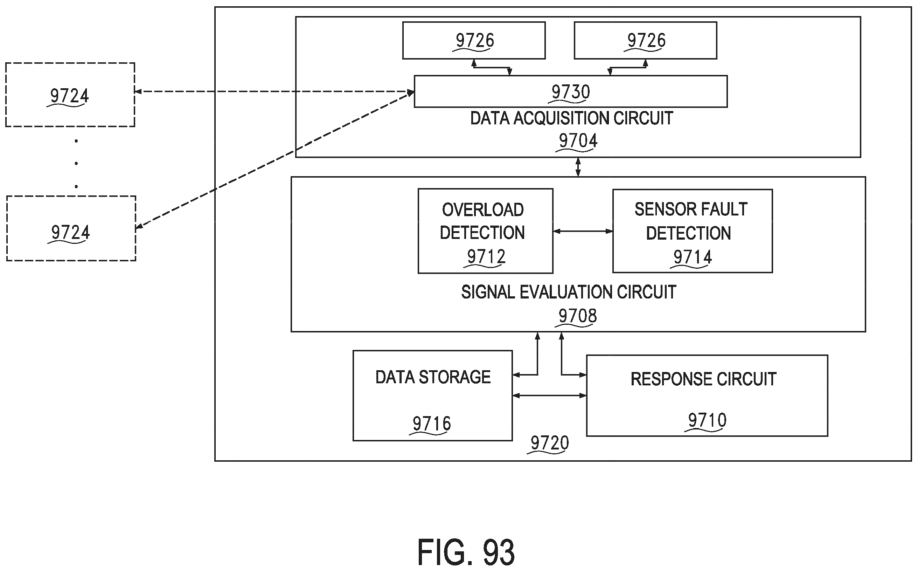

In embodiments, as illustrated in Figure 91, the sensors 9706 may be part of the data monitoring device 9700, referred to herein in some cases as a data collector, which in some cases may comprise a mobile or portable data collector. In embodiments, as illustrated in Figures 92 and 93, one or more external sensors 9724, which are not explicitly part of a monitoring device 9718 but rather are new, previously attached to or integrated into the equipment or component, may be opportunistically connected to or accessed by the monitoring device 9718. The monitoring device may include a data acquisition circuit 9722, a signal evaluation circuit 9708, a data storage circuit 9716 and a response circuit 9710. The signal evaluation circuit 9708 may comprise an overload detection circuit 9712, a sensor fault detection circuit 9714, or both. Additionally, the signal evaluation circuit 9708 may optionally comprise one or more of a peak detection circuit, a phase detection circuit, a bandpass filter circuit, a frequency transformation circuit, a frequency analysis circuit, a phase lock loop circuit, a torsional analysis circuit, a bearing analysis circuit, and the like. The data acquisition circuit 9722 may include one or more input ports 9726.

The one or more external sensors 9724 may be directly connected to the one or more input ports 9726 on the data acquisition circuit 9722 of the controller 9720 or may be accessed by the data acquisition circuit 9722 wirelessly, such as by a reader, interrogator, or other wireless connection, such as over a short-distance wireless protocol. In embodiments, as shown in Figure 93, a data acquisition circuit 9722 may further comprise a wireless communication circuit 9730. The data acquisition circuit 9722 may use the wireless communication circuit 9730 to access detection values corresponding to the one or more external sensors 9724 wirelessly or via a separate source or some combination of these methods.

In embodiments, the data storage circuit 9716 may be structured to store sensor specifications, anticipated state information and detected values. The data storage circuit 9716 may provide specifications and anticipated state information to the signal evaluation circuit 9708.

In embodiments, an overload detection circuit 9712 may detect sensor overload by comparing the detected value associated with the sensor with a detected value associated with a sensor having a greater range/lower resolution monitoring the same component/attribute. Inconsistencies in measured value may indicate that the higher resolution sensor may be overloaded. In embodiments, an overload detection circuit 9712 may detect sensor overload by evaluating consistency of sensor reading with readings from other sensor data (monitoring the same or different aspects of the component/piece of equipment. In embodiments, an overload detection circuit 9712 may detect sensor overload by evaluating data collected by other sensors to identify conditions likely to result in sensor overload (e.g., heat flux sensor data indicative of the likelihood of overloading a sensor in a given location, accelerometer data indicating a likelihood of overloading a velocity sensor, and the like). In embodiments, an overload detection circuit 9712 may detect sensor overload by identifying flat line output following a rising trend. In embodiments, an overload detection circuit 9712 may detect sensor overload by transforming the sensor data to frequency data, using for example a Fast Fourier Transform (FFT), and then looking for a "ski-jump" in the frequency data which may result from the data being clipped due to an overloaded sensor. A sensor fault detection circuit 9714 may identify failure of the sensor itself, sensor health, or potential concerns regarding validity of sensor data. Rate of value change may be used to identify failure of the sensor itself. For example, a sudden jump to a maximum output may indicate a failure in the sensor rather than an overload of the sensor. In embodiments, an overload detection circuit 9712 and/or a sensor fault detection circuit 9712 may utilize sensor specifications, anticipated state information, sensor models and the like in the identification of sensor overload, failure, error, invalid data, and the like. In embodiments, the overload detection circuit 9712 or the sensor fault detection circuit 9714 may use detection values from other sensors and output from additional components such as a peak detection circuit and/or a phase detection circuit and/or a bandpass filter circuit and/or a frequency transformation circuit and/or a frequency analysis circuit and/or a phase lock loop circuit and the like to identify potential sources for the identified sensor overload, sensor faults, sensor failure, or the like. Sources or factors involved in sensor overload may include limitations on sensor range, sensor resolution, and sensor sampling frequency. Sources of apparent sensor overload may be due to a range, resolution or sampling frequency of a multiplexor suppling detection values associated with the sensor. Sources of factors involved in apparent sensor faults or failures may include environmental conditions; for example, excessive heat or cold may be associated with damage to semiconductor-based sensors, which may result in erratic sensor data, failure of a sensor to produce data, data that appears out of the range of normal behavior (e.g., large, discrete jumps in temperature for a system that does not normally experience such changes). Surges in current and/or voltage may be associated with damage to electrically connected sensors with sensitive components. Excessive vibration may result in physical damage to sensitive components of a sensor such as wires and/or connectors. An impact, which may be indicated by sudden acceleration or acoustical data may result in physical damage to a sensor with sensitive components such as wires and/or connectors. A rapid increase in humidity in the environment surrounding a sensor or an absence of oxygen may indicate water damage to a sensor. A sudden absence of signal from a sensor may be indicative of sensor disconnection which may due to vibration, impact and the like. A sensor that requires power may run out of battery power or be disconnected from a power source. In embodiments, the overload detection circuit 9712 or the sensor fault detection circuit 9714 may output a sensor status where the sensor status may be one of sensor overload, sensor failure, sensor fault, sensor healthy, and the like. The sensor fault detection circuit 9714 may determine one of a sensor fault status and a sensor validity status.

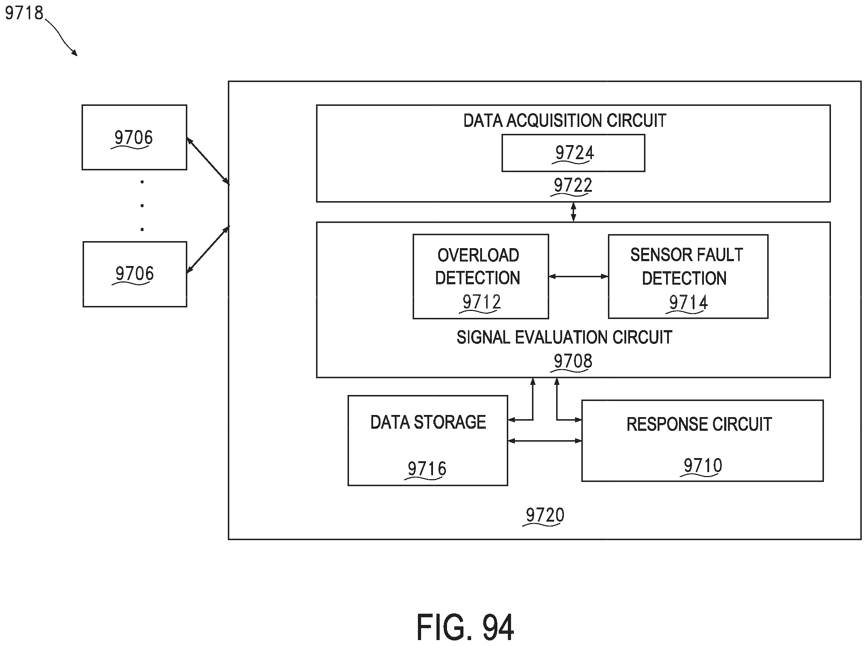

In embodiments, as illustrated in Figure 94, the data acquisition circuit 9722 may further comprise a multiplexer circuit 9731 as described elsewhere herein. Outputs from the multiplexer circuit 9731 may be utilized by the signal evaluation circuit 9708. The response circuit 9710 may have the ability to turn on or off portions of the multiplexor circuit 9731. The response circuit 9710 may have the ability to control the control channels of the multiplexor circuit 9731.

In embodiments, the response circuit 9710 may initiate a variety of actions based on the sensor status provided by the overload detection circuit 9712. The response circuit 9710 may continue using the sensor if the sensor status is "sensor healthy." The response circuit 9710 may adjust a sensor scaling value (e.g., from 100mV/gram to 10 mV/gram). The response circuit 9710 may increase an acquisition range for an alternate sensor. The response circuit 9710 may back sensor data out of previous calculations and evaluations such as bearing analysis, torsional analysis and the like. The response circuit 9710 may use projected or anticipated data (based on data acquired prior to overload/failure) in place of the actual sensor data for calculations and evaluations such as bearing analysis, torsional analysis and the like. The response circuit 9710 may issue an alarm. The response circuit 9710 may issue an alert that may comprise notification that the sensor is out of range together with information regarding the extent of the overload such as "overload range-data response may not be reliable and/or linear", "destructive range- sensor may be damaged," and the like. The response circuit 9710 may issue an alert where the alert may comprise information regarding the effect of sensor load such as "unable to monitor machine health" due to sensor overload/failure," and the like.

In embodiments, the response circuit 9710 may cause the data acquisition circuit 9704 to enable or disable the processing of detection values corresponding to certain sensors based on the sensor statues described above. This may include switching to sensors having different response rates, sensitivity, ranges, and the like; accessing new sensors or types of sensors, accessing data from multiple sensors, recruiting additional data collectors (such as routing the collectors to a point of work, using routing methods and systems disclosed throughout this disclosure and the documents incorporated by reference) and the like. Switching may be undertaken based on a model, a set of rules, or the like. In embodiments, switching may be under control of a machine learning system, such that switching is controlled based on one or more metrics of success, combined with input data, over a set of trials, which may occur under supervision of a human supervisor or under control of an automated system. Switching may involve switching from one input port to another (such as to switch from one sensor to another). Switching may involve altering the multiplexing of data, such as combining different streams under different circumstances. Switching may involve activating a system to obtain additional data, such as moving a mobile system (such as a robotic or drone system), to a location where different or additional data is available (such as positioning an image sensor for a different view or positioning a sonar sensor for a different direction of collection) or to a location where different sensors can be accessed (such as moving a collector to connect up to a sensor that is disposed at a location in an environment by a wired or wireless connection). This switching may be implemented by changing the control signals for a multiplexor circuit 9731 and/or by turning on or off certain input sections of the multiplexor circuit 9731.

In embodiments, the response circuit 9710 may make recommendations for the replacement of certain sensors in the future with sensors having different response rates, sensitivity, ranges, and the like. The response circuit 9710 may recommend design alterations for future embodiments of the component, the piece of equipment, the operating conditions, the process, and the like.

In embodiments, the response circuit 9710 may recommend maintenance at an upcoming process stop or initiate a maintenance call where the maintenance may include the replacement of the sensor with the same or an alternate type of sensor having a different response rate, sensitivity, range and the like. In embodiments, the response circuit 9710 may implement or recommend process changes - for example to lower the utilization of a component that is near a maintenance interval, operating off-nominally, or failed for purpose but still at least partially operational, to change the operating speed of a component (such as to put it in a lower-demand mode), to initiate amelioration of an issue (such as to signal for additional lubrication of a roller bearing set, or to signal for an alignment process for a system that is out of balance), and the like.

In embodiments, the signal evaluation circuit 9708 and/or the response circuit 9710 may periodically store certain detection values in the data storage circuit 9716 to enable the tracking of component performance over time. In embodiments, based on sensor status, as described elsewhere herein recently measured sensor data and related operating conditions such as RPMs, component loads, temperatures, pressures, vibrations or other sensor data of the types described throughout this disclosure in the data storage circuit 9716 to enable the backing out of overloaded/failed sensor data. The signal evaluation circuit 9708 may store data at a higher data rate for greater granularity in future processing, the ability to reprocess at different sampling rates, and/or to enable diagnosing or post-processing of system information where operational data of interest is flagged, and the like.

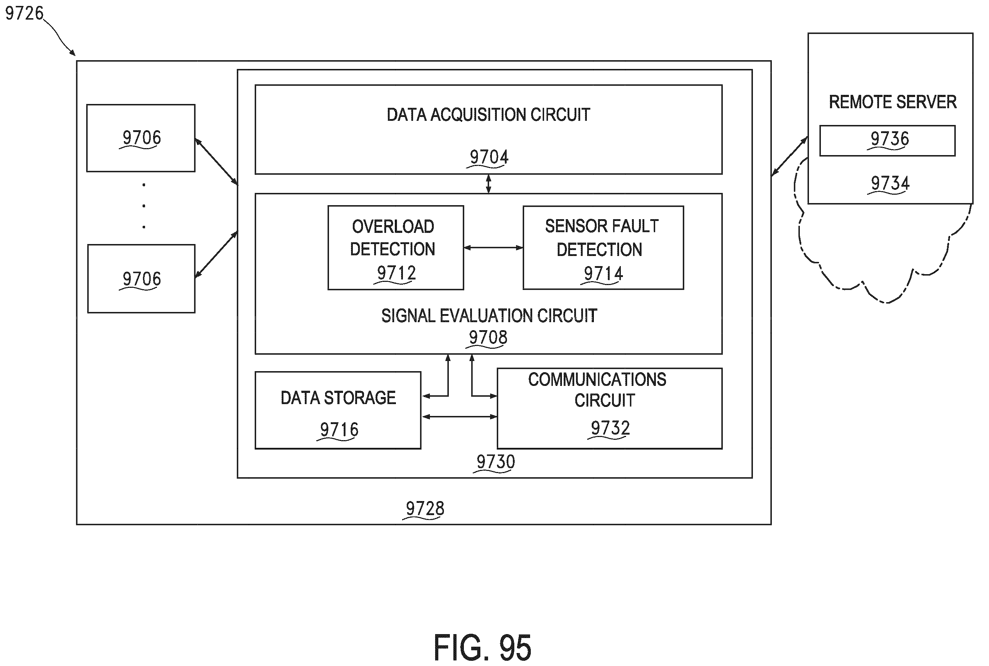

In embodiments as shown in Figures 95, 96, 97, and 98, a data monitoring system 9726 may include at least one data monitoring device 9728. At least one data monitoring device 9728 may include sensors 9706 and a controller 9730 comprising a data acquisition circuit 9704, a signal evaluation circuit 9708, a data storage circuit 9716, and a communication circuit 9754 to allow data and analysis to be transmitted to a monitoring application 9736 on a remote server 9734. The signal evaluation circuit 9708 may include at least an overload detection circuit 9712. The signal evaluation circuit 9708 may periodically share data with the communication circuit 9732 for transmittal to the remote server 9734 to enable the tracking of component and equipment performance over time and under varying conditions by a monitoring application 9736. Based on the sensor status, the signal evaluation circuit 9708 and/or response circuit 9710 may share data with the communication circuit 9732 for transmittal to the remote server 9734 based on the fit of data relative to one or more criteria. Data may include recent sensor data and additional data such as RPMs, component loads, temperatures, pressures, vibrations, and the like for transmittal. The signal evaluation circuit 9708 may share data at a higher data rate for transmittal to enable greater granularity in processing on the remote server.

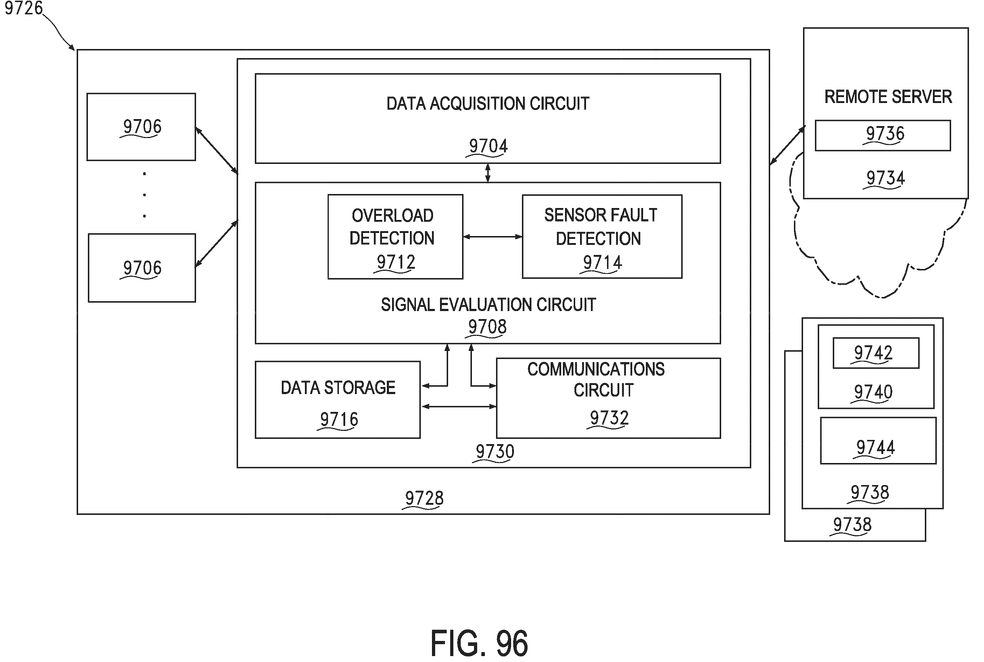

In embodiments, as shown in Figure 95, the communication circuit 9732 may communicate data directly to a remote server 9734. In embodiments as shown in Figure 96, the communication circuit 9732 may communicate data to an intermediate computer 9738 which may include a processor 9740 running an operating system 9742 and a data storage circuit 9744.

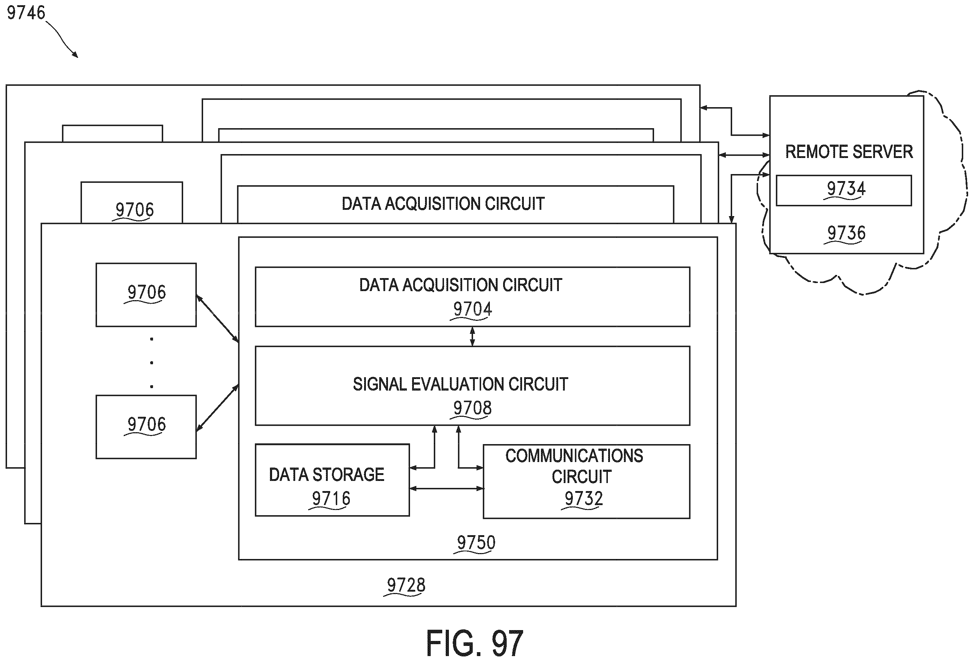

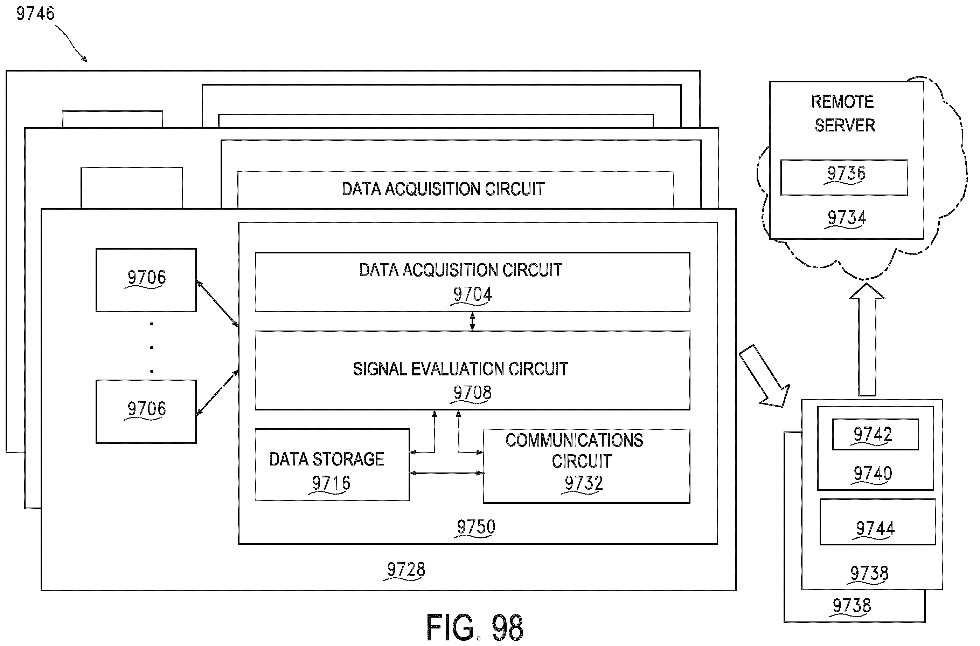

In embodiments, as illustrated in Figures 97 and 98, a data collection system 9746 may have a plurality of monitoring devices 9728 collecting data on multiple components in a single piece of equipment, collecting data on the same component across a plurality of pieces of equipment, (both the same and different types of equipment) in the same facility as well as collecting data from monitoring devices in multiple facilities. A monitoring application 9736 on a remote server 9734 may receive and store one or more of detection values, timing signals and data coming from a plurality of the various monitoring devices 9728.

In embodiments, as shown in Figure 97, the communication circuit 9732 may communicated data directly to a remote server 9734. In embodiments, as shown in Figure 98, the communication circuit 9732 may communicate data to an intermediate computer 9738 which may include a processor 9740 running an operating system 9742 and a data storage circuit 9744. There may be an individual intermediate computer 9738 associated with each monitoring device 9728 or an individual intermediate computer 9738 may be associated with a plurality of monitoring devices 9728 where the intermediate computer 9738 may collect data from a plurality of data monitoring devices and send the cumulative data to the remote server 9734. Communication to the remote server 9734 may be streaming, batch (e.g., when a connection is available) or opportunistic.

The monitoring application 9736 may select subsets of the detection values to be jointly analyzed. Subsets for analysis may be selected based on a single type of sensor, component or a single type of equipment in which a component is operating. Subsets for analysis may be selected or grouped based on common operating conditions such as size of load, operational condition (e.g., intermittent, continuous), operating speed or tachometer, common ambient environmental conditions such as humidity, temperature, air or fluid particulate, and the like. Subsets for analysis may be selected based on the effects of other nearby equipment such as nearby machines rotating at similar frequencies, nearby equipment producing electromagnetic fields, nearby equipment producing heat, nearby equipment inducing movement or vibration, nearby equipment emitting vapors, chemicals or particulates, or other potentially interfering or intervening effects.

In embodiments, the monitoring application 9736 may analyze the selected subset. In an illustrative example, data from a single sensor may be analyzed over different time periods such as one operating cycle, several operating cycles, a month, a year, the life of the component or the like. Data from multiple sensors of a common type measuring a common component type may also be analyzed over different time periods. Trends in the data such as changing rates of change associated with start-up or different points in the process may be identified. Correlation of trends and values for different sensors may be analyzed to identify those parameters whose short-term analysis might provide the best prediction regarding expected sensor performance. This information may be transmitted back to the monitoring device to update sensor models, sensor selection, sensor range, sensor scaling, sensor sampling frequency, types of data collected and analyzed locally or to influence the design of future monitoring devices.

In embodiments, the monitoring application 9736 may have access to equipment specifications, equipment geometry, component specifications, component materials, anticipated state information for a plurality of sensors, operational history, historical detection values, sensor life models and the like for use analyzing the selected subset using rule-based or model-based analysis. The monitoring application 9736 may provide recommendations regarding sensor selection, additional data to collect, or data to store with sensor data. The monitoring application 9736 may provide recommendations regarding scheduling repairs and/or maintenance. The monitoring application 9736 may provide recommendations regarding replacing a sensor. The replacement sensor may match the sensor being replaced or the replacement sensor may have a different range, sensitivity, sampling frequency and the like.

In embodiments, the monitoring application 9736 may include a remote learning circuit structured to analyze sensor status data (e.g., sensor overload, sensor faults, sensor failure) together with data from other sensors, failure data on components being monitored, equipment being monitored, product being produced, and the like. The remote learning system may identify correlations between sensor overload and data from other sensors.

Clause 1: In embodiments, a monitoring system for data collection in an industrial environment, the monitoring system comprising: a data acquisition circuit structured to interpret a plurality of detection values, each of the plurality of detection values corresponding to at least one of a plurality of input sensors; a data storage circuit structured to store sensor specifications, anticipated state information and detected values; a signal evaluation circuit comprising: an overload identification circuit structured to determine a sensor overload status of at least one sensor in response to the plurality of detection values and at least one of anticipated state information and sensor specification; a sensor fault detection circuit structured to determine one of a sensor fault status and a sensor validity status of at least one sensor in response to the plurality of detection values and at least one of anticipated state information and sensor specification; and a response circuit structured to perform at least one operation in response to one of a sensor overload status, a sensor health status, and a sensor validity status. A monitoring system of clause 1, the system further comprising a mobile data collector for collecting data from the plurality of input sensors. 3. The monitoring system of clause 1, wherein the at least one operation comprises issuing an alert or an alarm. 4. The monitoring system of clause 1, wherein the at least one operation further comprises storing additional data in the data storage circuit. 5. The monitoring system of clause 1, the system further comprising a multiplexor (MUX) circuit. 6. The monitoring system of clause 5, wherein the at least one operation comprises at least one of enabling or disabling one or more portions of the multiplexer circuit and altering the multiplexer control lines. 7. The monitoring system of clause 5, the system further comprising at least two multiplexer (MUX) circuits and the at least one operation comprises changing connections between the at least two multiplexer circuits. 8. The monitoring system of clause 7, the system further comprising a MUX control circuit structured to interpret a subset of the plurality of detection values and provide the logical control of the MUX and the correspondence of MUX input and detected values as a result, wherein the logic control of the MUX comprises adaptive scheduling of the multiplexer control lines. 9. A system for data collection, processing, and component analysis in an industrial environment comprising: a plurality of monitoring devices, each monitoring device comprising: a data acquisition circuit structured to interpret a plurality of detection values, each of the plurality of detection values corresponding to at least one of a plurality of input sensors; a data storage for storing specifications and anticipated state information for a plurality of sensor types and buffering the plurality of detection values for a predetermined length of time; a signal evaluation circuit comprising: an overload identification circuit structured to determine a sensor overload status of at least one sensor in response to the plurality of detection values and at least one of anticipated state information and sensor specification; a sensor fault detection circuit structured to determine one of a sensor fault status and a sensor validity status of at least one sensor in response to the plurality of detection values and at least one of anticipated state information and sensor specification; and a response circuit structured to perform at least one operation in response to one of a sensor overload status, a sensor health status, and a sensor validity status; a communication circuit structured to communicate with a remote server providing one of the sensor overload status, the sensor health status, and the sensor validity status and a portion of the buffered detection values to the remote server; and a monitoring application on the remote server structured to: receive the at least one selected detection value and one of the sensor overload status, the sensor health status, and the sensor validity status; jointly analyze a subset of the detection values received from the plurality of monitoring devices; and recommend an action. 10. The system of clause 9, with at least one of the monitoring devices further comprising a mobile data collector for collecting data from the plurality of input sensors. 11. The system of clause 9, wherein the at least one operation comprises issuing an alert or an alarm. 12. The monitoring system of clause 9, wherein the at least one operation further comprises storing additional data in the data storage circuit. 13. The system of clause 9, with at least one of the monitoring devices further comprising further comprising a multiplexor (MUX) circuit. 14. The system of clause 13, wherein the at least one operation comprises at least one of enabling or disabling one or more portions of the multiplexer circuit and altering the multiplexer control lines. 15. The system of clause 9, at least one of the monitoring devices further comprising at least two multiplexer (MUX) circuits and the at least one operation comprises changing connections between the at least two multiplexer circuits. 16. The monitoring system of clause 15, the system further comprising a MUX control circuit structured to interpret a subset of the plurality of detection values and provide the logical control of the MUX and the correspondence of MUX input and detected values as a result, wherein the logic control of the MUX comprises adaptive scheduling of the multiplexer control lines. 17. The system of clause 9, wherein the monitoring application comprises a remote learning circuit structured to analyze sensor status data together sensor data and identify correlations between sensor overload and data from other systems. 18. The system of clause 9, the monitoring application structured to subset detection values based on one of the sensor overload status, the sensor health status, the sensor validity status, the anticipated life of a sensor associated with detection values, the anticipated type of the equipment associated with detection values, and operational conditions under which detection values were measured. 19. The system of clause 9, wherein the supplemental information comprises one of sensor specification, sensor historic performance, maintenance records, repair records and an anticipated state model. 20. The system of clause 19, wherein the analysis of the subset of detection values comprises feeding a neural net with the subset of detection values and supplemental information to learn to recognize various sensor operating states, health states, life expectancies and fault states utilizing deep learning techniques.

Within the data collection, monitoring, and control environment of the industrial IoT are large and various sensor sets, which make efficient setup and timely changes to sensor data collection a challenge. Continuous collection from all sensors may be impossible given the large number of sensors and limited resources, such as limited availability of power and limited data collection and management facilities, including various limitations in availability and performance of sensor data collection devices, input/output interfaces, data transfer facilities, data storage, data analysis facilities, and the like. The number of sensors collected from at any given time must therefore be limited in an intelligent but timely manner, both at the time of setting up initial collection and during the process of collection, including handling rapid changes to a present collection scheme based on a change in state of a system, operational conditions (e.g., an alert condition, change in operational mode, etc.), or the like. Embodiments of the methods and systems disclosed herein may therefore include rapid route creation and modification for routing collectors, such as by taking advantage of hierarchical templates, execution of smart route changes, monitoring and responding to changes in operational conditions, and the like.

In embodiments, rapid route creation and modification for data collection in an industrial environment may take advantage of hierarchical templates. Templates may be used to take advantage of 'like' machinery that can utilize the same hierarchical sensor routing scheme. For example, among many possible types of machines about which data may be collected, the members of a certain class of motor, such as a stepper motor class, may have very similar sensor routing needs, such as for routine operations, routine maintenance, and failure mode detection, that may be described in a common hierarchy of sensor collection routines. The user installing a new stepper motor may then use the 'stepper motor hierarchical routing template' for the new motor. After installation, the stepper motor hierarchical routing template may then be used to change the routing schemes for changing conditions. The user may optionally make adjustments to the template as needed per unique motor functions, applications, environments, modes, and the like. The use of a template for deploying a routing scheme greatly reduces the time a user requires to configure the routing scheme for a new motor, or to deploy new routing technologies on an existing system that utilizes traditional sensor collection methods. Once the hierarchical routing template is in place, the sensor collection routine may be changed quickly based on the template, thus allowing for rapid route modification under changing conditions, such as: a change in the operating mode of the stepper motor that requires a different subset of sensors for monitoring, a limit alert or failure indication that requires a more focused subset of sensors for use in diagnosing the problem, and the like. Hierarchical routing templates thus allow for rapid deployment of sensor routing configurations, as well as allowing the sensed industrial environment to be altered dynamically as conditions change.

A functional hierarchy of routing templates may include different hierarchical configurations for a component, machine, system, industrial environment, and the like, including all sensors and a plurality of configurations formed from a subset of all sensors. At a system level, an 'all-sensor' configuration may include: a connection map to all sensors in a system, mapping to all onboard instrumentation sensors (e.g., monitoring points reporting within a machine or set of machines), mapping to an environment's sensors (e.g., monitoring points around the machines/equipment, but not necessarily onboard), mapping to available sensors on data collectors (e.g., data collectors that can be flexibly provisioned for particular data among different kinds), a unified map combining different individual mappings, and the like. A routing configuration may be provided, such as to indicate how to implement an operational routing scheme, a scheduled maintenance routing scheme (e.g., collecting from a greater set of overall sensors than in operational mode, but distributed across the system, or a focused sensor set for specific components, functions, and modes), one or more failure mode routing schemes for multiple focused sensor collection groups targeting different failure mode analyses (e.g., for a motor, one failure mode may be for bearings, another for startup speed-torque, where a different subset of sensor data is needed based on the failure mode, such as detected in anomalous readings taken during operations or maintenance), power savings (e.g., weather conditions necessitating reduced plant power), and the like.

As noted, hierarchical templates may also be conditional (e.g., rule-based), such as templates with conditional routing based on parameters, such as sensed data during a first collection period, where a subsequent routing configuration is varied. Within the hierarchy, nodes in a graph or tree may indicate forks by which conditional logic may be used, such as to select a given subset of sensors for a given operational mode. Thus, the hierarchical template may be associated with a rule-based or model-based expert system, which may facilitate automated routing based on the hierarchical template and based on observed conditions, such as based on a type of machine and its operational state, environmental context, or the like. In a non-limiting example, a hierarchical template may have an initial collection configuration and a conditional hierarchy in place to switch from the initial collection configuration to a second collection configuration based on the sensed conditions of an initial sensor collection. Continuing this example, among various possible machines, a conveyor system may have a plurality of sensors for collection in an initial collection, but once the first data is collected and analyzed, if the conveyor is determined to be in an idle state (such as due to the absence of a signal above a minimum threshold on a motion sensor), then the system may switch to a sensor data collection regime that is appropriate for the idles state of the conveyor (e.g., using a very small subset of the plurality of sensors, such as just using the motion sensor to detect departure from the idle state, at which point the original regime may be renewed and the rest of a sensor set may be re-engaged). Thus, when the collection of sensor data detects a changed condition to a state, an operational mode, an environmental condition, or the like, the sensor data collection may be switched to an appropriate configuration.

Hierarchical templates for one collector may be based on coordination of routing with that of other collectors. For instance, a collector might be set up to perform vibration analysis while another collector is set up to perform pressure or temperature on each machine in a set of similar machines, rather than having each machine collect all of the data on each machine, where otherwise setup for different sensor types may be required for each collector for each machine. Factors such as the duration of sampling required, the time required to set up a given sensor, the amount of power consumed, the time available for collection as a whole, the data rate of input/output of a sensor and/or the collector, the bandwidth of a channel (wired or wireless) available for transmission of collected data, and the like can be considered in arranging the coordination of the routing of two or more collectors, such that various parallel and serial configurations may be undertaken to achieve an overall effectiveness. This may include optimizing the coordination using an expert system, such as a rule-based optimization, a model-based optimization, or optimization using machine learning.

A machine learning system may create a hierarchical template structure for improved routing, such as for teaching the system the default operating conditions (e.g., normal operations mode, systems online and average production), peak operations mode (max capability), slack production, and the like. The machine learning system may create a new hierarchical template based on monitored conditions, such as a template based on a production level profile, a rate of production profile, a detected failure mode pattern analysis, and the like. The application of a new machine learning created template may be based on a mode matching between current production conditions and a machine learning template condition (e.g., the machine learning system creates a new template for a new production profile, and applies that new template whenever that new profile is detected).

Rapid route creation may be enabled using one or more hierarchical routing templates, such as when a routing template pre-establishes a routing scheme for different conditions, and when a trigger event executes a change in the sensor routing scheme to accommodate the condition. In embodiments, the trigger event may be an automatic change in routing based on a trigger that indicates a possible failure mode that forces a change in routing scheme from operational to failure mode analysis; a human-executed change in routing scheme based on received sensor data; a learned routing change based on machine learning of when to trigger a change (e.g., as based on a machine being fed with a set of human-executed or human-supervised changes); a manual routing change (e.g., optional to automatic/rapid automatic change); a human executed change based on observed device performance; and the like. Routing changes may include: changing from an operational mode to an accelerated maintenance, a failure mode analysis, a power saving mode a high-performance/high-output mode (e.g., for peak power in a generation plant), and the like.

Switching hierarchical template configurations may be executed based on connectivity with end-device sensors. In a highly automated collection routing environment (e.g., an indoor networked assembly plant) different routing collection configurations may be employed for fixed and flexible industrial layouts. In a fixed industrial layout, such as a layout with a high degree of wired connectivity between end-device sensors, automated collectors, and networks, there may be different routing configurations for a network routing hierarchy portion, a collector sensor-collection hierarchy portion, a storage portion, and the like. For a more flexible industrial layout with various wired and wireless connections between end-device sensors, automated collectors, and networks, there may be different schemes. For instance, a moderately automated collection routing environment may include: automatic collection and periodic network connection; a robot-carried collector for periodic collection (e.g., a ground-based robot, a drone, an underwater device, a robot with network connection, a robot with intermittent network connection, a robot that periodically uploads collection); a routing scheme with periodic collection and automated routing; a scheme only collecting periodically but routed directly upon collection; a routing scheme with periodic collection and periodic automated routing to collect periodically; and, over longer periods of time, periodically routing multiple collections; and the like. For a lower degree of automated collection routing, there may be a combination of: automatic collection and human-aided collectors (e.g., humans collecting alone, humans aided by robots), scheduled collection and human-aided collectors (e.g., humans initiating collection, humans aided by robots for collection initiation, human launching a drone to collect data at a remote site), and the like.

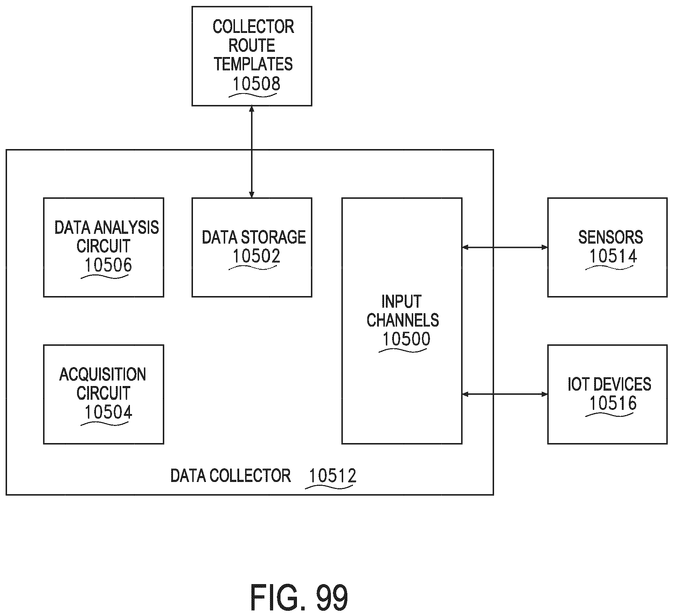

In embodiments, and referring to Figure 99, hierarchical templates may be utilized by a local data collection system 10500 for collection and monitoring of data collected through a plurality of input channels 10500, such as data from sensors 10514, IoT devices 10516, and the like. The local collection system 10512, also referred to herein as a data collector 10512, may comprise a data storage 10502; a data acquisition circuit 10504; a data analysis circuit 10506; and the like, wherein the monitoring facilities may be deployed: locally on the data collector 10512; in part locally on the data collector and in part on a remote information technology infrastructure component apart from the data collector; and the like. A monitoring system may comprise a plurality of input channels communicatively coupled to the data collector 10512. The data storage 10502 may be structured to store a plurality of collector route templates 10510 and sensor specifications for sensors 10514 that correspond to the input channels 10500, wherein the plurality of collector route templates 10510 each comprise a different sensor collection routine. A data acquisition circuit 10504 may be structured to interpret a plurality of detection values, each of the plurality of detection values corresponding to at least one of the input channels 10500, and a data analysis circuit 10506 structured to receive output data from the plurality of input channels 10500 and evaluate a current routing template collection routine based on the received output data, wherein the data collector 10500 is configured to switch from the current routing template collection routine to an alternative routing template collection routine based on the content of the output data. The monitoring system may further utilize a machine learning system (e.g., a neural network expert system), rule-based templates (e.g., based on an operational state of a machine with respect to which the input channels provide information, the input channels provide information, the input channels provide information), smart route changes, alarm states, network connectivity, self-organization amongst a plurality of data collectors, coordination of sensor groups, and the like.

In embodiments, evaluation of the current routing templates may be based on operational mode routing collection schemes, such as a normal operational mode, a peak operational mode, an idle operational mode, a maintenance operational mode, a power saving operational mode, and the like. As a result of monitoring, the data collector may switch from a current routing template collection routine because the data analysis circuit determines a change in operating modes, such as the operating mode changing from an operational mode to an accelerated maintenance mode, the operating mode changing from an operational mode to a failure mode analysis mode, the operating mode changing from an operational mode to a power-saving mode, the operating mode changing from an operational mode to a high-performance mode, and the like. The data collector may switch from a current routing template collection routine based on a sensed change in a mode of operation, such as a failure condition, a performance condition, a power condition, a temperature condition, a vibration condition, and the like. The evaluation of the current routing template collection routine may be based on a collection routine with respect to a collection parameter, such as network availability, sensor availability, a time-based collection routine (e.g., on a schedule, over time), and the like.

In embodiments, a monitoring system for data collection in an industrial environment may comprise: a data collector communicatively coupled to a plurality of input channels; a data storage structured to store a plurality of collector route templates and sensor specifications for sensors that correspond to the input channels, wherein the plurality of collector route templates each comprise a different sensor collection routine; a data acquisition circuit structured to interpret a plurality of detection values, each of the plurality of detection values corresponding to at least one of the input channels; and a data analysis circuit structured to receive output data from the plurality of input channels and evaluate a current routing template collection routine based on the received output data, wherein the data collector is configured to switch from the current routing template collection routine to an alternative routing template collection routine based on the content of the output data. In embodiments, the system is deployed locally on the data collector, in part locally on the data collector and in part on a remote information technology infrastructure component apart from the collector, and the like. Each of the input channels may correspond to a sensor located in the environment. The evaluation of the current routing template may be based on operational mode routing collection schemes. The operational mode is at least one of a normal operational mode, a peak operational mode, an idle operational mode, a maintenance operational mode, and a power saving operational mode. The data collector may switch from the current routing template collection routine because the data analysis circuit determines a change in operating modes, such as where the operating mode changes from an operational mode to an accelerated maintenance mode, from an operational mode to a failure mode analysis mode, from an operational mode to a power saving mode, from an operational mode to high-performance mode, and the like. The data collector may switch from the current routing template collection routine based on a sensed change in a mode of operation, such as where the sensed change is a failure condition, a performance condition, a power condition, a temperature condition, a vibration condition, and the like. The evaluation of the current routing template collection routine may be based on a collection routine with respect to a collection parameter, such as where the parameter is network availability, sensor availability, a time-based collection routine (e.g., where a routine collects sensor data on a schedule, evaluates sensor data over time).

In embodiments, a computer-implemented method for implementing a monitoring system for data collection in an industrial environment may comprise: providing a data collector communicatively coupled to a plurality of input channels; providing a data storage structured to store a plurality of collector route templates and sensor specifications for sensors that correspond to the input channels, wherein the plurality of collector route templates each comprise a different sensor collection routine; providing a data acquisition circuit structured to interpret a plurality of detection values, each of the plurality of detection values corresponding to at least one of the input channels; and providing a data analysis circuit structured to receive output data from the plurality of input channels and evaluate a current routing template collection routine based on the received output data, wherein the data collector is configured to switch from the current routing template collection routine to an alternative routing template collection routine based on the content of the output data. In embodiments, the computer-implemented method is deployed locally on the data collector, such as deployed in part locally on the data collector and in part on a remote information technology infrastructure component apart from the collector, where each of the input channels correspond to a sensor located in the environment.

In embodiments, one or more non-transitory computer-readable media comprising computer executable instructions that, when executed, may cause at least one processor to perform actions comprising: providing a data collector communicatively coupled to a plurality of input channels; providing a data storage structured to store a plurality of collector route templates and sensor specifications for sensors that correspond to the input channels, wherein the plurality of collector route templates each comprise a different sensor collection routine; providing a data acquisition circuit structured to interpret a plurality of detection values, each of the plurality of detection values corresponding to at least one of the input channels; and providing a data analysis circuit structured to receive output data from the plurality of input channels and evaluate a current routing template collection routine based on the received output data, wherein the data collector is configured to switch from the current routing template collection routine to an alternative routing template collection routine based on the content of the output data. In embodiments, the instructions may be deployed locally on the data collector, such as deployed in part locally on the data collector and in part on a remote information technology infrastructure component apart from the collector, where each of the input channels correspond to a sensor located in the environment.

In embodiments, a monitoring system for data collection in an industrial environment may comprise a data collector communicatively coupled to a plurality of input channels; a data storage structured to store a plurality of collector route templates, sensor specifications for sensors that correspond to the input channels, wherein the plurality of collector route templates each comprise a different sensor collection routine; a data acquisition circuit structured to interpret a plurality of detection values, each of the plurality of detection values corresponding to at least one of the input channels; and a machine learning data analysis circuit structured to receive output data from the plurality of input channels and evaluate a current routing template collection routine based on the received output data received over time, wherein the machine learning data analysis circuit learns received output data patterns, wherein the data collector is configured to switch from the current routing template collection routine to an alternative routing template collection routine based on the learned received output data patterns. In embodiments, the monitoring system may be deployed locally on the data collector, such as deployed in part locally on the data collector and in part on a remote information technology infrastructure component apart from the collector, where each of the input channels correspond to a sensor located in the environment. The machine learning data analysis circuit may include a neural network expert system. The evaluation of the current routing template may be based on operational mode routing collection schemes. The operational mode may be at least one of a normal operational mode, a peak operational mode, an idle operational mode, a maintenance operational mode, and a power saving operational mode. The data collector may switch from the current routing template collection routine because the data analysis circuit determines a change in operating modes, such as where the operating mode changes from an operational mode to an accelerated maintenance mode, from an operational mode to a failure mode analysis mode, from an operational mode to a power saving mode, from an operational mode to high-performance mode, and the like. The data collector may switch from the current routing template collection routine based on a sensed change in a mode of operation, such as where the sensed change is a failure condition, a performance condition, a power condition, a temperature condition, a vibration condition, and the like. The evaluation of the current routing template collection routine may be based on a collection routine with respect to a collection parameter, such as where the parameter is network availability, a sensor availability, a time-based collection routine (collects sensor data on a schedule, evaluates sensor data over time).

In embodiments, a computer-implemented method for implementing a monitoring system for data collection in an industrial environment may comprise: providing a data collector communicatively coupled to a plurality of input channels; providing a data storage structured to store a plurality of collector route templates, sensor specifications for sensors that correspond to the input channels, wherein the plurality of collector route templates each comprise a different sensor collection routine; providing a data acquisition circuit structured to interpret a plurality of detection values, each of the plurality of detection values corresponding to at least one of the input channels; and providing a machine learning data analysis circuit structured to receive output data from the plurality of input channels and evaluate a current routing template collection routine based on the received output data received over time, wherein the machine learning data analysis circuit learns received output data patterns, wherein the data collector is configured to switch from the current routing template collection routine to an alternative routing template collection routine based on the learned received output data patterns. In embodiments, the method may be deployed locally on the data collector, such as deployed in part locally on the data collector and in part on a remote information technology infrastructure component apart from the collector, where each of the input channels correspond to a sensor located in the environment.

In embodiments, one or more non-transitory computer-readable media comprising computer executable instructions that, when executed, may cause at least one processor to perform actions comprising: providing a data collector communicatively coupled to a plurality of input channels; providing a data storage structured to store a plurality of collector route templates, sensor specifications for sensors that correspond to the input channels, wherein the plurality of collector route templates each comprise a different sensor collection routine; providing a data acquisition circuit structured to interpret a plurality of detection values, each of the plurality of detection values corresponding to at least one of the input channels; and providing a machine learning data analysis circuit structured to receive output data from the plurality of input channels and evaluate a current routing template collection routine based on the received output data received over time, wherein the machine learning data analysis circuit learns received output data patterns, wherein the data collector is configured to switch from the current routing template collection routine to an alternative routing template collection routine based on the learned received output data patterns. In embodiments, the instructions may be deployed locally on the data collector, such as deployed in part locally on the data collector and in part on a remote information technology infrastructure component apart from the collector, where each of the input channels correspond to a sensor located in the environment.

In embodiments, a monitoring system for data collection in an industrial environment may comprise: a data collector communicatively coupled to a plurality of input channels; a data storage structured to store a collector route template, sensor specifications for sensors that correspond to the input channels, wherein the collector route template comprises a sensor collection routine; a data acquisition circuit structured to interpret a plurality of detection values, each of the plurality of detection values corresponding to at least one of the input channels; and a data analysis circuit structured to receive output data from the plurality of input channels and evaluate the received output data with respect to a rule, wherein the data collector is configured to modify the sensor collection routine based on the application of the rule to the received output data. In embodiments, the system may be deployed locally on the data collector, such as deployed in part locally on the data collector and in part on a remote information technology infrastructure component apart from the collector, where each of the input channels correspond to a sensor located in the environment. The rule may be based on an operational state of a machine with respect to which the input channels provide information, on an anticipated state of a machine with respect to which the input channels provide information, on a detected fault condition of a machine with respect to which the input channels provide information, and the like. The evaluation of the received output data may be based on operational mode routing collection schemes, where the operational mode is at least one of a normal operational mode, a peak operational mode, an idle operational mode, a maintenance operational mode, and a power saving operational mode. The data collector may modify the sensor collection routine because the data analysis circuit determines a change in operating modes, such as where the operating mode changes from an operational mode to an accelerated maintenance mode, from an operational mode to a failure mode analysis mode, from an operational mode to a power saving mode, from an operational mode to high-performance mode, and the like. The data collector may modify the sensor collection routine based on a sensed change in a mode of operation, such as where the sensed change is a failure condition, a performance condition, a power condition, a temperature condition, a vibration condition, and the like. The evaluation of the received output data may be based on a collection routine with respect to a collection parameter, wherein the parameter is a network availability, a sensor availability, a time-based collection routine (e.g., collects sensor data on a schedule or over time), and the like.

In embodiments, a computer-implemented method for implementing a monitoring system for data collection in an industrial environment may comprise: providing a data collector communicatively coupled to a plurality of input channels; providing a data storage structured to store a collector route template, sensor specifications for sensors that correspond to the input channels, wherein the collector route template comprises a sensor collection routine; providing a data acquisition circuit structured to interpret a plurality of detection values, each of the plurality of detection values corresponding to at least one of the input channels; and providing a data analysis circuit structured to receive output data from the plurality of input channels and evaluate the received output data with respect to a rule, wherein the data collector is configured to modify the sensor collection routine based on the application of the rule to the received output data. In embodiments, the method may be deployed locally on the data collector, such as deployed in part locally on the data collector and in part on a remote information technology infrastructure component apart from the collector, where each of the input channels correspond to a sensor located in the environment.

In embodiments, one or more non-transitory computer-readable media comprising computer executable instructions that, when executed, may cause at least one processor to perform actions comprising: providing a data collector communicatively coupled to a plurality of input channels; providing a data storage structured to store a collector route template, sensor specifications for sensors that correspond to the input channels, wherein the collector route template comprises a sensor collection routine; providing a data acquisition circuit structured to interpret a plurality of detection values, each of the plurality of detection values corresponding to at least one of the input channels; and providing a data analysis circuit structured to receive output data from the plurality of input channels and evaluate the received output data with respect to a rule, wherein the data collector is configured to modify the sensor collection routine based on the application of the rule to the received output data. In embodiments, the instructions may be deployed locally on the data collector, such as deployed in part locally on the data collector and in part on a remote information technology infrastructure component apart from the collector, where each of the input channels correspond to a sensor located in the environment.

Rapid route creation and modification in an industrial environment may employ smart route changes based on incoming data or alarms, such as changes enabling dynamic selection of data collection for analysis or correlation. Smart route changes may enable the system to alter current routing of sensor data based on incoming data or alarms. For instance, a user may set up a routing configuration that establishes a schedule of sensor collection for analysis, but when the analysis (or an alarm) indicates a special need, the system may change the sensor routing to address that need. For example, in the case where a change in a motor vibration profile (as one example among any of the machines described throughout this disclosure), such as rapidly increasing the peak amplitude of shaking on at least one axis of a vibration sensor set, that indicates a potential early failure of the motor, the system may change the routing to collect more focused data collection for analysis, such as initiating collection on more axes of the motor, initiating collection on additional bearings of the motor, and/or initiating collection using other sensors (such as temperature or heat flux sensors), that may confirm an initial hypothesis that the failure mode is occurring or otherwise assist in analysis of the state or operational condition of the machine.

Detected operational mode changes may trigger a rapid route change. For instance, an operational mode may be detected as the result of a single-point sensor out-of-range detection, an analysis determination, and the like, and generate a routing change. An analysis determination may be detected from a sensor end-point, such as through a single-point sensor analysis, a multiple-point sensor analysis, an analysis domain analysis (e.g., through a time profile, frequency profile, correlated multi-point determination), and the like. In another instance, a maintenance mode may be detected during routine maintenance, where a routing change increases data collection to capture data at a higher rate under an anomalous condition. A failure mode may be detected, such as through an alarm that indicates near-term potential for a failure of a machine that triggers increased data capture rate for analysis. Performance-based modes may be detected, such as detecting a level of output rate (e.g., peak, slack, idle), which may then initiate changes in routing to accommodate the analysis needs for the different performance monitoring and metrics associated with the state. For example, if a high peak speed is detected for a motor, a conveyor, an assembly line, a generator, a turbine, or the like, relative to historical measurements over some time period, additional sensors may be engaged to watch for failures that are typically associated with peak speeds, such as overheating (as measured by engaging a temperature or heat flux sensor), excessive noise (as measured by an acoustic or noise sensor), excessive shaking (as measured by one or more vibration sensors), or the like.

Alarm detections may trigger a rapid route change. Alarm sources may include a front-end collector, local intelligence resource, back-end data analysis process, ambient environment detector, network quality detector, power quality detector, heat, smoke, noise, flooding, and the like. Alarm types may include a single-instance anomaly detection, multiple-instance anomaly detection, simultaneous multi-sensor detection, time-clustered sensor detection (e.g., a single sensor or multiple sensors), frequency-profile detection (e.g., increasing rate of anomaly detection such as an alarm increasing in its occurrence over time, a change in a frequency component of a sensor output such as a motor's physical vibration profile changing over time), and the like.

A machine learning system may change routing based on learned alarm pattern analysis. The machine learning system may learn system alarm condition patterns, such as alarm conditions expected under normal operating conditions, under peak operating conditions, expected over time based on age of components (e.g., new, during operational life, during extended life, during a warrantee period), and the like. The machine learning system may change routing based on a change in an alarm pattern, such as a system operating normally but experiencing a peak operating alarm pattern (e.g., a system running when it should not be), a system is new but experiencing an older profile (e.g., detection of infant mortality), and the like. The machine learning system may change routing based on a current alarm profile vs. an expected change in production condition. For example, a plant, system, or component is experiencing above average alarm conditions just before a ramp-up of production (e.g., could be foretelling of above average failures during increased production), just before going slack (e.g., could be an opportunity to ramp up maintenance procedures based on increased data taking routing scheme), after an unplanned event (e.g., weather, power outage, restart), and the like.

A rapid route change action may include: an increased rate of sampling (e.g., to a single sensor, to multiple sensors), an increase in the number of sensors being sampled (e.g., simultaneous sampling of other sensors on a device, coordinated sampling of similar sensors on near-by devices), generating a burst of sampling (e.g., sampling at a high rate for a period of time), and the like. Actions may be executed on a schedule, coordinated with a trigger, based on an operational mode, and the like. Triggered actions may include: anomalous data, an exceeded threshold level, an operational event trigger (e.g., at startup condition such as for startup motor torque), and the like.

A rapid route change may switch between routing schemes, such as an operational routing scheme (e.g., a subset of sensor collection for normal operations), a scheduled maintenance routing scheme (e.g., an increased and focused set of sensor collection than for normal operations), and the like. The distribution of sensor data may be changed, such as to distribute sensor collection across the system, such as for a sensor collection set for specific components, functions, and modes. A failure mode routing scheme may entail multiple focused sensor collection groups targeting different failure mode analyses (e.g., for a motor, one failure mode may be for bearings, another for startup speed-torque) where a different subset of sensor data may be needed based on the failure mode (e.g., as detected in anomalous readings taken during operations or maintenance). Power saving mode routing may be executed when weather conditions necessitate reduced plant power.

Dynamic adjustment of route changes may be executed based on connectivity factors, such as the factors associated with the collector or network availability and bandwidth. For example, routing may be changed for a device associated with an alarm detection, where changing routing for targeted devices on the network frees up bandwidth. Changes to routing may have a duration, such as only for a pre-determined period of time and then switching back, maintaining a change until user-directed, changing duration based on network availability, and the like.

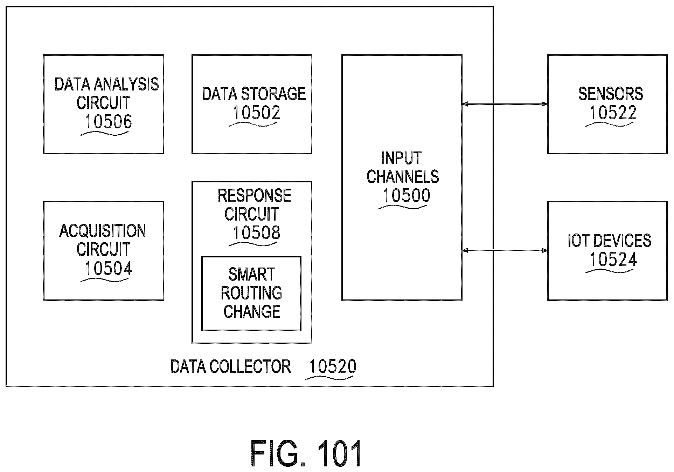

In embodiments, and referring to Figure 101, smart route changes may be implemented by a local data collection system 10520 for collection and monitoring of data collected through a plurality of input channels 10500, such as data from sensors 10522, IoT devices 10524, and the like. The local collection system 102, also referred to herein as a data collector 10520, may comprise a data storage 10502, a data acquisition circuit 10504, a data analysis circuit 10506, a response circuit 10508, and the like, wherein the monitoring facilities may be deployed locally on the data collector 10520, in part locally on the data collector and in part on a remote information technology infrastructure component apart from the data collector, and the like. Smart route changes may be implemented between data collectors, such as where a state message is transmitted between the data collectors (e.g., from an input channel that is mounted in proximity to a second input channel, from a related group of input sensors, and the like). A monitoring system may comprise a plurality of input channels 10500 communicatively coupled to the data collector 10520. The data acquisition circuit 10504 may be structured to interpret a plurality of detection values, each of the plurality of detection values corresponding to at least one of the input channels 10500, wherein the data acquisition circuit 10504 acquires sensor data from a first route of input channels for the plurality of input channels. The data storage 10502 may be structured to store sensor data, sensor specifications, and the like, for sensors 10524 that correspond to the input channels 10500. The data analysis circuit 10506 may be structured to evaluate the sensor data with respect to stored anticipated state information, wherein the anticipated state information may include an alarm threshold level, and wherein the data analysis circuit 10506 sets an alarm state when the alarm threshold level is exceeded for a first input channel in the first group of input channels. Further, the data analysis circuit 10506 may transmit the alarm state across a network to a routing control facility 10512. The response circuit 10508 may be structured to change the routing of the input channels for data collection from the first routing of input channels to an alternate routing of input channels upon reception of a routing change indication from the routing control facility. In the case of a network transmission, the alternate routing of input channels may include the first input channel and a group of input channels related to the first input channel, where the data collector executes the change in routing of the input channels if a communication parameter of the network between the data collector and the routing control facility is not met (e.g., a time-period parameter, a network connection and/or bandwidth availability parameter).

In embodiments, an alarm state may indicate a detection mode, such as an operational mode detection comprising an out-of-range detection, a maintenance mode detection comprising an alarm detected during maintenance, a failure mode detection (e.g., where the controller communicates a failure mode detection facility), a power mode detection wherein the alarm state is indicative of a power related limitation data of the anticipated state information, a performance mode detection wherein the alarm state is indicative of a high-performance limitation data of the anticipated state information, and the like. The monitoring system may further include the analysis circuit setting the alarm state when the alarm threshold level is exceeded for an alternate input channel in the first group of input channels, such as where the setting of the alarm state for the first input channel and the alternate input channel are determined to be a multiple-instance anomaly detection, wherein the second routing of input channels comprises the first input channel and a second input channel, wherein the sensor data from the first input channel and the second input channel contribute to simultaneous data analysis. The second routing of input channels may include a change in a routing collection parameter, such as where the routing collection parameter is an increase in sampling rate, an increase in the number of channels being sampled, a burst sampling of at least one of the plurality of input channels, and the like.

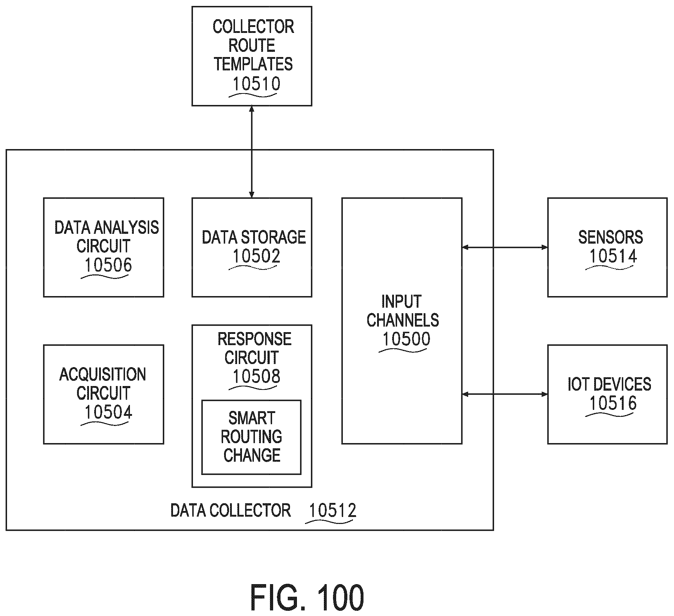

In embodiments, and referring to Figure 100, collector route templates 10510 may be utilized for smart route changes and may be implemented by a local data collection system 10512 for collection and monitoring of data collected through a plurality of input channels 10500, such as data from sensors 10514, IoT devices 10516, and the like. The local collection system 10512, also referred to herein as a data collector 10512, may comprise a data storage 10502, a data acquisition circuit 10504, a data analysis circuit 10506, a response circuit 10508, and the like, wherein the monitoring facilities may be deployed locally on the data collector 10512, in part locally on the data collector and in part on a remote information technology infrastructure component apart from the data collector, and the like.

In embodiments, a monitoring system for data collection in an industrial environment may comprise: a data collector communicatively coupled to a plurality of input channels; a data acquisition circuit structured to interpret a plurality of detection values, each of the plurality of detection values corresponding to at least one of the input channels, wherein the data acquisition circuit acquires sensor data from a first route of input channels for the plurality of input channels; a data storage structured to store sensor specifications for sensors that correspond to the input channels; a data analysis circuit structured to evaluate the sensor data with respect to stored anticipated state information, wherein the anticipated state information comprises an alarm threshold level, and wherein the data analysis circuit sets an alarm state when the alarm threshold level is exceeded for a first input channel in the first group of input channels; and a response circuit structured to change the routing of the input channels for data collection from the first routing of input channels to an alternate routing of input channels, wherein the alternate routing of input channels comprise the first input channel and a group of input channels related to the first input channel. In embodiments, the system may be deployed locally on the data collector, deployed in part locally on the data collector and in part on a remote information technology infrastructure component apart from the collector, wherein each of the input channels correspond to a sensor located in the environment. The group of input channels may be related to the first input channel are at least in part taken from the plurality of input channels not included in the first routing of input channels. An alarm state may indicate a detection mode, such as where the detection mode is an operational mode detection comprising an out-of-range detection, the detection mode is a maintenance mode detection comprising an alarm detected during maintenance, the detection mode is a failure mode detection. The controller may communicate the failure mode detection facility, such as where the detection mode is a power mode detection and the alarm state is indicative of a power related limitation data of the anticipated state information, the detection mode is a performance mode detection and the alarm state is indicative of a high-performance limitation data of the anticipated state information, and the like. The analysis circuit may set the alarm state when the alarm threshold level is exceeded for an alternate input channel in the first group of input channels, such as where the setting of the alarm state for the first input channel and the alternate input channel are determined to be a multiple-instance anomaly detection, wherein the alternate routing of input channels comprises the first input channel and a second input channel, wherein the sensor data from the first input channel and the second input channel contribute to simultaneous data analysis. The alternate routing of input channels may include a change in a routing collection parameter, such as for an increase in sampling rate, an increase in the number of channels being sampled, a burst sampling of at least one of the plurality of input channels, and the like.

In embodiments, a computer-implemented method for implementing a monitoring system for data collection in an industrial environment may comprise: providing a data collector communicatively coupled to a plurality of input channels; providing a data acquisition circuit structured to interpret a plurality of detection values, each of the plurality of detection values corresponding to at least one of the input channels, wherein the data acquisition circuit acquires sensor data from a first route of input channels for the plurality of input channels; providing a data storage structured to store sensor specifications for sensors that correspond to the input channels; providing a data analysis circuit structured to evaluate the sensor data with respect to stored anticipated state information, wherein the anticipated state information comprises an alarm threshold level, and wherein the data analysis circuit sets an alarm state when the alarm threshold level is exceeded for a first input channel in the first group of input channels; and providing a response circuit structured to change the routing of the input channels for data collection from the first routing of input channels to an alternate routing of input channels, wherein the alternate routing of input channels comprise the first input channel and a group of input channels related to the first input channel. In embodiments, the system may be deployed locally on the data collector, deployed in part locally on the data collector and in part on a remote information technology infrastructure component apart from the collector, wherein each of the input channels correspond to a sensor located in the environment.

In embodiments, one or more non-transitory computer-readable media comprising computer executable instructions that, when executed, may cause at least one processor to perform actions may comprise: providing a data collector communicatively coupled to a plurality of input channels; providing a data acquisition circuit structured to interpret a plurality of detection values, each of the plurality of detection values corresponding to at least one of the input channels, wherein the data acquisition circuit acquires sensor data from a first route of input channels for the plurality of input channels; providing a data storage structured to store sensor specifications for sensors that correspond to the input channels; providing a data analysis circuit structured to evaluate the sensor data with respect to stored anticipated state information, wherein the anticipated state information comprises an alarm threshold level, and wherein the data analysis circuit sets an alarm state when the alarm threshold level is exceeded for a first input channel in the first group of input channels; and providing a response circuit structured to change the routing of the input channels for data collection from the first routing of input channels to an alternate routing of input channels, wherein the alternate routing of input channels comprise the first input channel and a group of input channels related to the first input channel. In embodiments, the instructions may be deployed locally on the data collector, deployed in part locally on the data collector and in part on a remote information technology infrastructure component apart from the collector, wherein each of the input channels correspond to a sensor located in the environment.

In embodiments, a monitoring system for data collection in an industrial environment may comprise: a data collector communicatively coupled to a plurality of input channels; a data acquisition circuit structured to interpret a plurality of detection values, each of the plurality of detection values corresponding to at least one of the input channels, wherein the data acquisition circuit acquires sensor data from a first route of input channels for the plurality of input channels; a data storage structured to store sensor specifications for sensors that correspond to the input channels; a data analysis circuit structured to evaluate the sensor data with respect to stored anticipated state information, wherein the anticipated state information comprises an alarm threshold level, and wherein the data analysis circuit sets an alarm state when the alarm threshold level is exceeded for a first input channel in the first group of input channels and transmits the alarm state across a network to a routing control facility; and a response circuit structured to change the routing of the input channels for data collection from the first routing of input channels to an alternate routing of input channels upon reception of a routing change indication from the routing control facility, wherein the alternate routing of input channels comprise the first input channel and a group of input channels related to the first input channel, wherein the data collector automatically executes the change in routing of the input channels if a communication parameter of the network between the data collector and the routing control facility is not met. In embodiments, the instructions may be deployed locally on the data collector, deployed in part locally on the data collector and in part on a remote information technology infrastructure component apart from the collector, wherein each of the input channels correspond to a sensor located in the environment. The communication parameter may be a time-period parameter within which the routing control facility must respond. The communication parameter may be a network availability parameter, such as a network connection parameter or bandwidth requirement. The group of input channels related to the first input channel may be at least in part taken from the plurality of input channels not included in the first routing of input channels. The alarm state may indicate a detection mode, such as an operational mode detection comprising an out-of-range detection, a maintenance mode detection comprising an alarm detected during maintenance, and the like. The detection mode may be a failure mode detection, such as when the controller communicates the failure mode detection facility, the alarm state is indicative of a power related limitation data of the anticipated state information, the detection mode is a performance mode detection where the alarm state is indicative of a high-performance limitation data of the anticipated state information, and the like. The analysis circuit may set the alarm state when the alarm threshold level is exceeded for an alternate input channel in the first group of input channels, such as where the setting of the alarm state for the first input channel and the alternate input channel are determined to be a multiple-instance anomaly detection, wherein the alternate routing of input channels comprises the first input channel and a second input channel, wherein the sensor data from the first input channel and the second input channel contribute to simultaneous data analysis. The alternate routing of input channels may be a change in a routing collection parameter, such as an increase in sampling rate, is an increase in the number of channels being sampled, a burst sampling of at least one of the plurality of input channels, and the like.

In embodiments, a computer-implemented method for implementing a monitoring system for data collection in an industrial environment may comprise: providing a data collector communicatively coupled to a plurality of input channels; providing a data acquisition circuit structured to interpret a plurality of detection values, each of the plurality of detection values corresponding to at least one of the input channels, wherein the data acquisition circuit acquires sensor data from a first route of input channels for the plurality of input channels; providing a data storage structured to store sensor specifications for sensors that correspond to the input channels; providing a data analysis circuit structured to evaluate the sensor data with respect to stored anticipated state information, wherein the anticipated state information comprises an alarm threshold level, and wherein the data analysis circuit sets an alarm state when the alarm threshold level is exceeded for a first input channel in the first group of input channels and transmits the alarm state across a network to a routing control facility; and providing a response circuit structured to change the routing of the input channels for data collection from the first routing of input channels to an alternate routing of input channels upon reception of a routing change indication from the routing control facility, wherein the alternate routing of input channels comprise the first input channel and a group of input channels related to the first input channel, wherein the data collector automatically executes the change in routing of the input channels if a communication parameter of the network between the data collector and the routing control facility is not met. In embodiments, the instructions may be deployed locally on the data collector, deployed in part locally on the data collector and in part on a remote information technology infrastructure component apart from the collector, wherein each of the input channels correspond to a sensor located in the environment.

In embodiments, one or more non-transitory computer-readable media comprising computer executable instructions that, when executed, may cause at least one processor to perform actions comprising: providing a data collector communicatively coupled to a plurality of input channels; providing a data acquisition circuit structured to interpret a plurality of detection values, each of the plurality of detection values corresponding to at least one of the input channels, wherein the data acquisition circuit acquires sensor data from a first route of input channels for the plurality of input channels; providing a data storage structured to store sensor specifications for sensors that correspond to the input channels; providing a data analysis circuit structured to evaluate the sensor data with respect to stored anticipated state information, wherein the anticipated state information comprises an alarm threshold level, and wherein the data analysis circuit sets an alarm state when the alarm threshold level is exceeded for a first input channel in the first group of input channels and transmits the alarm state across a network to a routing control facility; and providing a response circuit structured to change the routing of the input channels for data collection from the first routing of input channels to an alternate routing of input channels upon reception of a routing change indication from the routing control facility, wherein the alternate routing of input channels comprise the first input channel and a group of input channels related to the first input channel, wherein the data collector automatically executes the change in routing of the input channels if a communication parameter of the network between the data collector and the routing control facility is not met. In embodiments, the instructions may be deployed locally on the data collector, deployed in part locally on the data collector and in part on a remote information technology infrastructure component apart from the collector, wherein each of the input channels correspond to a sensor located in the environment.

In embodiments, a monitoring system for data collection in an industrial environment may comprise: a first and second data collector communicatively coupled to a plurality of input channels; a data acquisition circuit structured to interpret a plurality of detection values, each of the plurality of detection values corresponding to at least one of the input channels, wherein the data acquisition circuit acquires sensor data from a first route of input channels for the plurality of input channels; a data storage structured to store sensor specifications for sensors that correspond to the input channels; a data analysis circuit structured to evaluate the sensor data with respect to stored anticipated state information, wherein the anticipated state information comprises an alarm threshold level, and wherein the data analysis circuit sets an alarm state when the alarm threshold level is exceeded for a first input channel in the first group of input channels; a communication circuit structured to communicate with a second data collector, wherein the second data collector transmits a state message related to a first input channel from the first route of input channels; and a response circuit structured to change the routing of the input channels for data collection from the first routing of input channels to an alternate routing of input channels based on the state message from the second data collector, wherein the alternate routing of input channel comprise the first input channel and a group of input channels related to the first input sensor. In embodiments, the system may be deployed locally on the data collector, deployed in part locally on the data collector and in part on a remote information technology infrastructure component apart from the collector, wherein each of the input channels correspond to a sensor located in the environment. The set state message transmitted from the second data collector may be from a second input channel that is mounted in proximity to the first input channel. The set alarm transmitted from the second controller may be from a second input sensor that is part of a related group of input sensors comprising the first input sensor. The group of input channels related to the first input channel may be at least in part taken from the plurality of input channels not included in the first routing of input channels. The alarm state may indicate a detection mode, such as where the detection mode is an operational mode detection comprising an out-of-range detection, a maintenance mode detection comprising an alarm detected during maintenance, is a failure mode detection, and the like. The controller may communicate the failure mode detection facility, such as where the detection mode is a power mode detection and the alarm state is indicative of a power related limitation data of the anticipated state information, the detection mode is a performance mode detection where the alarm state is indicative of a high-performance limitation data of the anticipated state information, and the like. The analysis circuit may set the alarm state when the alarm threshold level is exceeded for an alternate input channel in the first group of input channels, such as where the setting of the alarm state for the first input channel and the alternate input channel are determined to be a multiple-instance anomaly detection, wherein the alternate routing of input channels comprises the first input channel and a second input channel, wherein the sensor data from the first input channel and the second input channel contribute to simultaneous data analysis. The alternate routing of input channels may be a change in a routing collection parameter, such as an increase in sampling rate, an increase in the number of channels being sampled, a burst sampling of at least one of the plurality of input channels, and the like.

In embodiments, a computer-implemented method for implementing a monitoring system for data collection in an industrial environment may comprise: providing a first and second data collector communicatively coupled to a plurality of input channels; providing a data acquisition circuit structured to interpret a plurality of detection values, each of the plurality of detection values corresponding to at least one of the input channels, wherein the data acquisition circuit acquires sensor data from a first route of input channels for the plurality of input channels; providing a data storage structured to store sensor specifications for sensors that correspond to the input channels; providing a data analysis circuit structured to evaluate the sensor data with respect to stored anticipated state information, wherein the anticipated state information comprises an alarm threshold level, and wherein the data analysis circuit sets an alarm state when the alarm threshold level is exceeded for a first input channel in the first group of input channels; providing a communication circuit structured to communicate with a second data collector, wherein the second data collector transmits a state message related to a first input channel from the first route of input channels, and providing a response circuit structured to change the routing of the input channels for data collection from the first routing of input channels to an alternate routing of input channels based on the state message from the second data collector, wherein the alternate routing of input channel comprise the first input channel and a group of input channels related to the first input sensor. In embodiments, the method may be deployed locally on the data collector, deployed in part locally on the data collector and in part on a remote information technology infrastructure component apart from the collector, wherein each of the input channels correspond to a sensor located in the environment.

In embodiments, one or more non-transitory computer-readable media comprising computer executable instructions that, when executed, may cause at least one processor to perform actions comprising: providing a first and second data collector communicatively coupled to a plurality of input channels; providing a data acquisition circuit structured to interpret a plurality of detection values, each of the plurality of detection values corresponding to at least one of the input channels, wherein the data acquisition circuit acquires sensor data from a first route of input channels for the plurality of input channels; providing a data storage structured to store sensor specifications for sensors that correspond to the input channels; providing a data analysis circuit structured to evaluate the sensor data with respect to stored anticipated state information, wherein the anticipated state information comprises an alarm threshold level, and wherein the data analysis circuit sets an alarm state when the alarm threshold level is exceeded for a first input channel in the first group of input channels; providing a communication circuit structured to communicate with a second data collector, wherein the second data collector transmits a state message related to a first input channel from the first route of input channels, and providing a response circuit structured to change the routing of the input channels for data collection from the first routing of input channels to an alternate routing of input channels based on the state message from the second data collector, wherein the alternate routing of input channel comprise the first input channel and a group of input channels related to the first input sensor. In embodiments, the instructions may be deployed locally on the data collector, deployed in part locally on the data collector and in part on a remote information technology infrastructure component apart from the collector, wherein each of the input channels correspond to a sensor located in the environment.

In embodiments, a monitoring system for data collection in an industrial environment may comprise: a data collector communicatively coupled to a plurality of input channels; a data acquisition circuit structured to interpret a plurality of detection values, each of the plurality of detection values corresponding to at least one of the input channel, wherein the data acquisition circuit acquires sensor data from a first group of input channels from the plurality of input channels; a data storage structured to store sensor specifications for sensors that correspond to the input channels; a data analysis circuit structured to evaluate the sensor data with respect to stored anticipated state information, wherein the anticipated state information comprises an alarm threshold level, and wherein the data analysis circuit sets an alarm state when the alarm threshold level is exceeded for a first input channel in the first group of input channel; and a response circuit structured to change the input channels being collected from the first group of input channels to an alternative group of input channels, wherein the alternate group of input channels comprise the first input channel and a group of input channels related to the first input sensor. In embodiments, the system may be deployed locally on the data collector, deployed in part locally on the data collector and in part on a remote information technology infrastructure component apart from the collector, wherein each of the input channels correspond to a sensor located in the environment. The group of input sensors related to the first input sensor may be at least in part taken from the plurality of input sensors not included in the first group of input sensors. The first group of input channels related to the first input channel may be at least in part taken from the plurality of input channels not included in the first routing of input channels. The alarm state may indicate a detection mode, such as where the detection mode is an operational mode detection comprising an out-of-range detection, a maintenance mode detection comprising an alarm detected during maintenance. The detection mode may be a failure mode detection, such as where the controller communicates the failure mode detection facility. The detection mode may be a power mode detection where the alarm state is indicative of a power related limitation data of the anticipated state information. The detection mode may be a performance mode detection, where the alarm state is indicative of a high-performance limitation data of the anticipated state information. The analysis circuit may set the alarm state when the alarm threshold level is exceeded for an alternate input channel in the first group of input channels, such as when the setting of the alarm state for the first input channel and the alternate input channel are determined to be a multiple-instance anomaly detection, wherein the alternate routing of input channels comprises the first input channel and a second input channel, wherein the sensor data from the first input channel and the second input channel contribute to simultaneous data analysis. An alternative group of input channels may include a change in a routing collection parameter, such as where the routing collection parameter is an increase in sampling rate, an increase in the number of channels being sampled, a burst sampling of at least one of the plurality of input channels, and the like.

In embodiments, a computer-implemented method for implementing a monitoring system for data collection in an industrial environment may comprise: providing a data collector communicatively coupled to a plurality of input channels; providing a data acquisition circuit structured to interpret a plurality of detection values, each of the plurality of detection values corresponding to at least one of the input channel, wherein the data acquisition circuit acquires sensor data from a first group of input channels from the plurality of input channels; providing a data storage structured to store sensor specifications for sensors that correspond to the input channels; providing a data analysis circuit structured to evaluate the sensor data with respect to stored anticipated state information, wherein the anticipated state information comprises an alarm threshold level, and wherein the data analysis circuit sets an alarm state when the alarm threshold level is exceeded for a first input channel in the first group of input channel; and providing a response circuit structured to change the input channels being collected from the first group of input channels to an alternative group of input channels, wherein the alternate group of input channels comprise the first input channel and a group of input channels related to the first input sensor. In embodiments, the method may be deployed locally on the data collector, deployed in part locally on the data collector and in part on a remote information technology infrastructure component apart from the collector, wherein each of the input channels correspond to a sensor located in the environment.

In embodiments, one or more non-transitory computer-readable media comprising computer executable instructions that, when executed, may cause at least one processor to perform actions comprising: providing a data collector communicatively coupled to a plurality of input channels; providing a data acquisition circuit structured to interpret a plurality of detection values, each of the plurality of detection values corresponding to at least one of the input channel, wherein the data acquisition circuit acquires sensor data from a first group of input channels from the plurality of input channels; providing a data storage structured to store sensor specifications for sensors that correspond to the input channels; providing a data analysis circuit structured to evaluate the sensor data with respect to stored anticipated state information, wherein the anticipated state information comprises an alarm threshold level, and wherein the data analysis circuit sets an alarm state when the alarm threshold level is exceeded for a first input channel in the first group of input channel; and providing a response circuit structured to change the input channels being collected from the first group of input channels to an alternative group of input channels, wherein the alternate group of input channels comprise the first input channel and a group of input channels related to the first input sensor. In embodiments, the instructions may be deployed locally on the data collector, deployed in part locally on the data collector and in part on a remote information technology infrastructure component apart from the collector, wherein each of the input channels correspond to a sensor located in the environment.

In embodiments, a monitoring system for data collection in an industrial environment may comprise: a data collector communicatively coupled to a plurality of input channels; a data storage structured to store a plurality of collector route templates, sensor specifications for sensors that correspond to the input channels, wherein the plurality of collector route templates each comprise a different sensor collection routine; a data acquisition circuit structured to interpret a plurality of detection values, each of the plurality of detection values corresponding to at least one of the input channels, wherein the data acquisition circuit acquires sensor data from a first route of input channels; and a data analysis circuit structured to evaluate the sensor data with respect to stored anticipated state information, wherein the anticipated state information comprises an alarm threshold level, and wherein the data analysis circuit sets an alarm state when the alarm threshold level is exceeded for a first input channel in the first group of input channels, wherein the data collector is configured to switch from a current routing template collection routine to an alternate routing template collection routine based on a setting of an alarm state. In embodiments, the system may be deployed locally on the data collector, deployed in part locally on the data collector and in part on a remote information technology infrastructure component apart from the collector, wherein each of the input channels correspond to a sensor located in the environment. The setting of the alarm state may be based on operational mode routing collection schemes, such as where the operational mode is at least one of a normal operational mode, a peak operational mode, an idle operational mode, a maintenance operational mode, and a power saving operational mode. The alarm threshold level may be associated with a sensed change to one of the plurality of input channels, such as where the sensed change is a failure condition, is a performance condition, a power condition, a temperature condition, a vibration condition, and the like. The alarm state may indicate a detection mode, such as where the detection mode is an operational mode detection comprising an out-of-range detection, a maintenance mode detection comprising an alarm detected during maintenance, and the like. The detection mode may be a power mode detection, where the alarm state is indicative of a power related limitation data of the anticipated state information. The detection mode may be a performance mode detection, where the alarm state is indicative of a high-performance limitation data of the anticipated state information. The analysis circuit may set the alarm state when the alarm threshold level is exceeded for an alternate input channel, such as wherein the setting of the alarm state is determined to be a multiple-instance anomaly detection. The alternate routing template may be a change to an input channel routing collection parameter. The routing collection parameter may be an increase in sampling rate, such as an increase in the number of channels being sampled, a burst sampling of at least one of the plurality of input channels, and the like.

In embodiments, a computer-implemented method for implementing a monitoring system for data collection in an industrial environment may comprise: providing a data collector communicatively coupled to a plurality of input channels; providing a data storage structured to store a plurality of collector route templates, sensor specifications for sensors that correspond to the input channels, wherein the plurality of collector route templates each comprise a different sensor collection routine; providing a data acquisition circuit structured to interpret a plurality of detection values, each of the plurality of detection values corresponding to at least one of the input channels, wherein the data acquisition circuit acquires sensor data from a first route of input channels; and providing a data analysis circuit structured to evaluate the sensor data with respect to stored anticipated state information, wherein the anticipated state information comprises an alarm threshold level, and wherein the data analysis circuit sets an alarm state when the alarm threshold level is exceeded for a first input channel in the first group of input channels, wherein the data collector is configured to switch from a current routing template collection routine to an alternate routing template collection routine based on a setting of an alarm state. In embodiments, the system may be deployed locally on the data collector, deployed in part locally on the data collector and in part on a remote information technology infrastructure component apart from the collector, wherein each of the input channels correspond to a sensor located in the environment.

In embodiments, one or more non-transitory computer-readable media comprising computer executable instructions that, when executed, may cause at least one processor to perform actions comprising: providing a data collector communicatively coupled to a plurality of input channels; providing a data storage structured to store a plurality of collector route templates, sensor specifications for sensors that correspond to the input channels, wherein the plurality of collector route templates each comprise a different sensor collection routine; providing a data acquisition circuit structured to interpret a plurality of detection values, each of the plurality of detection values corresponding to at least one of the input channels, wherein the data acquisition circuit acquires sensor data from a first route of input channels; and providing a data analysis circuit structured to evaluate the sensor data with respect to stored anticipated state information, wherein the anticipated state information comprises an alarm threshold level, and wherein the data analysis circuit sets an alarm state when the alarm threshold level is exceeded for a first input channel in the first group of input channels, wherein the data collector is configured to switch from a current routing template collection routine to an alternate routing template collection routine based on a setting of an alarm state. In embodiments, the instructions may be deployed locally on the data collector, deployed in part locally on the data collector and in part on a remote information technology infrastructure component apart from the collector, wherein each of the input channels correspond to a sensor located in the environment.

Methods and systems are disclosed herein for a system for data collection in an industrial environment using intelligent management of data collection bands, referred to herein in some cases as smart bands. Smart bands may facilitate intelligent, situational, context-aware collection of data, such as by a data collector (such as any of the wide range of data collector embodiments described throughout this disclosure). Intelligent management of data collection via smart bands may improve various parameters of data collection, as well as parameters of the processes, applications, and products that depend on data collection, such as data quality parameters, consistency parameters, efficiency parameters, comprehensiveness parameters, reliability parameters, effectiveness parameters, storage utilization parameters, yield parameters (including financial yield, output yield, and reduction of adverse events), energy consumption parameters, bandwidth utilization parameters, input/output speed parameters, redundancy parameters, security parameters, safety parameters, interference parameters, signal-to-noise parameters, statistical relevancy parameters, and others. Intelligent management of smart bands may optimize across one or more such parameters, such as based on a weighting of the value of the parameters; for example, a smart band may be managed to provide a given level of redundancy for critical data, while not exceeding a specified level of energy usage. This may include using a variety of optimization techniques described throughout this disclosure and the documents incorporated herein by reference.

In embodiments, such methods and systems for intelligent management of smart bands include an expert system and supporting technology components, services, processes, modules, applications and interfaces, for managing the smart bands (collectively referred to in some cases as a smart band platform 10722), which may include a model-based expert system, a rule-based expert system, an expert system using artificial intelligence (such as a machine learning system, which may include a neural net expert system, a self-organizing map system, a human-supervised machine learning system, a state determination system, a classification system, or other artificial intelligence system), or various hybrids or combinations of any of the above. References to an expert system should be understood to encompass utilization of any one of the foregoing or suitable combinations, except where context indicates otherwise. Intelligent management may be of data collection of various types of data (e.g., vibration data, noise data and other sensor data of the types described throughout this disclosure) for event detection, state detection, and the like. Intelligent management may include managing a plurality of smart bands each directed at supporting an identified application, process or workflow, such as confirming progress toward or alignment with one or more objectives, goals, rules, policies, or guidelines. Intelligent management may also involve managing data collection bands targeted to backing out an unknown variable based on collection of other data (such as based on a model of the behavior of a system that involves the variable), selecting preferred inputs among available inputs (including specifying combinations, fusions, or multiplexing of inputs), and/or specifying an input band among available input bands.

Data collection bands, or smart bands, may include any number of items such as sensors, input channels, data locations, data streams, data protocols, data extraction techniques, data transformation techniques, data loading techniques, data types, frequency of sampling, placement of sensors, static data points, metadata, fusion of data, multiplexing of data, and the like as described herein. Smart band settings, which may be used interchangeably with smart band and data collection band, may describe the configuration and makeup of the smart band, such as by specifying the parameters that define the smart band. For example, data collection bands, or smart bands, may include one or more frequencies to measure. Frequency data may further include at least one of a group of spectral peaks, a true-peak level, a crest factor derived from a time waveform, and an overall waveform derived from a vibration envelope, as well as other signal characteristics described throughout this disclosure. Smart bands may include sensors measuring or data regarding one or more wavelengths, one or more spectra, and/or one or more types of data from various sensors and metadata. Smart bands may include one or more sensors or types of sensors of a wide range of types, such as described throughout this disclosure and the documents incorporated by reference herein. Indeed, the sensors described herein may be used in any of the methods or systems described throughout this disclosure. For example, one sensor may be an accelerometer, such as one that measures voltage per G ("V/G") of acceleration (e.g., 100 mV/G, 500 mV/G, 1 V/G, 5 V/G, 10 V/G, and the like). In embodiments, the data collection band circuit may alter the makeup of the subset of the plurality of sensors used in a smart band based on optimizing the responsiveness of the sensor, such as for example choosing an accelerometer better suited for measuring acceleration of a low speed mixer versus one better suited for measuring acceleration of a high speed industrial centrifuge. Choosing may be done intelligently, such as for example with a proximity probe and multiple accelerometers disposed on a centrifuge where while at low speed, one accelerometer is used for measuring in the smart band and another is used at high speeds. Accelerometers come in various types, such as piezo-electric crystal, low frequency (e.g., 10 V/G), high speed compressors (10 MV/G), MEMS, and the like. In another example, one sensor may be a proximity probe which can be used for sleeve or tilt-pad bearings (e.g., oil bath), or a velocity probe. In yet another example, one sensor may be a solid-state relay (SSR) that is structured to automatically interface with a routed data collector (such as a mobile or portable data collector) to obtain or deliver data. In another example, a mobile or portable data collector may be routed to alter the makeup of the plurality of available sensors, such as by bringing an appropriate accelerometer to a point of sensing, such as on or near a component of a machine. In still another example, one sensor may be a triax probe (e.g., a 100 MV/G triax probe), that in embodiments is used for portable data collection. In some embodiments, of a triax probe, a vertical element on one axis of the probe may have a high frequency response while the ones mounted horizontally may influence the frequency response of the whole triax. In another example, one sensor may be a temperature sensor and may include a probe with a temperature sensor built inside, such as to obtain a bearing temperature. In still additional examples, sensors may be ultrasonic, microphone, touch, capacitive, vibration, acoustic, pressure, strain gauges, thermographic (e.g., camera), imaging (e.g., camera, laser, IR, structured light), a field detector, an EMF meter to measure an AC electromagnetic field, a gaussmeter, a motion detector, a chemical detector, a gas detector, a CBRNE detector, a vibration transducer, a magnetometer, positional, location-based, a velocity sensor, a displacement sensor, a tachometer, a flow sensor, a level sensor, a proximity sensor, a pH sensor, a hygrometer / moisture sensor, a densitometric sensor, an anemometer, a viscometer, or any analog industrial sensor and/or digital industrial sensor. In a further example, sensors may be directed at detecting or measuring ambient noise, such as a sound sensor or microphone, an ultrasound sensor, an acoustic wave sensor, and an optical vibration sensor (e.g., using a camera to see oscillations that produce noise). In still another example, one sensor may be a motion detector.

Data collection bands, or smart bands, may be of or may be configured to encompass one or more frequencies, wavelengths, or spectra for particular sensors, for particular groups of sensors, or for combined signals from multiple sensors (such as involving multiplexing or sensor fusion).

Data collection bands, or smart bands, may be of or may be configured to encompass one or more sensors or sensor data (including groups of sensors and combined signals) from one or more pieces of equipment/components, areas of an installation, disparate but interconnected areas of an installation (e.g., a machine assembly line and a boiler room used to power the line), or locations (e.g., a building in Cambridge and a building in Boston). Smart band settings, configurations, instructions, or specifications (collectively referred to herein using any one of those terms) may include where to place a sensor, how frequently to sample a data point or points, the granularity at which a sample is taken (e.g., a number of sampling points per fraction of a second), which sensor of a set of redundant sensors to sample, an average sampling protocol for redundant sensors, and any other aspect that would affect data acquisition.

Within the smart band platform 10722, an expert system, which may comprise a neural net, a model-based system, a rule-based system, a machine learning data analysis circuit, and/or a hybrid of any of those, may begin iteration towards convergence on a smart band that is optimized for a particular goal or outcome, such as predicting and managing performance, health, or other characteristics of a piece of equipment, a component, or a system of equipment or components. Based on continuous or periodic analysis of sensor data, as patterns/trends are identified, or outliers appear, or a group of sensor readings begin to change, etc., the expert system may modify its data collection bands intelligently. This may occur by triggering a rule that reflects a model or understanding of system behavior (e.g., recognizing a shift in operating mode that calls for different sensors as velocity of a shaft increases) or it may occur under control of a neural net (either in combination with a rule-based approach or on its own), where inputs are provided such that the neural net over time learns to select appropriate collection modes based on feedback as to successful outcomes (e.g., successful classification of the state of a system, successful prediction, successful operation relative to a metric, or the like). For example, when a new pressure reactor is installed in a chemical processing facility, data from the current data collection band may not accurately predict the state or metric of operation of the system, thus, the machine learning data analysis circuit may begin to iterate to determine if a new data collection band is better at predicting a state. Based on offset system data, such as from a library or other data structure, certain sensors, frequency bands or other smart band members may be used in the smart band initially and data may be collected to assess performance. As the neural net iterates, other sensors/frequency bands may be accessed to determine their relative weight in identifying performance metrics. Over time, a new frequency band may be identified (or a new collection of sensors, a new set of configurations for sensors, or the like) as a better gauge of performance in the system and the expert system may modify its data collection band based on this iteration. For example, perhaps a slightly different or older associated turbine agitator in a chemical reaction facility dampens one or more vibration frequencies while a different frequency is of higher amplitude and present during optimal performance than what was seen in the offset system. In this example, the smart band may be altered from what was suggested by the corresponding offset system to capture the higher amplitude frequency that is present in the current system.

The expert system, in embodiments involving a neural net or other machine learning system, may be seeded and may iterate, such as towards convergence on a smart band, based on feedback and operation parameters, such as described herein. Certain feedback may include utilization measures, efficiency measures (e.g., power or energy utilization, use of storage, use of bandwidth, use of input/output use of perishable materials, use of fuel, and/or financial efficiency), measures of success in prediction or anticipation of states (e.g., avoidance and mitigation of faults), productivity measures (e.g., workflow), yield measures, and profit measures. Certain parameters may include: storage parameters (e.g., data storage, fuel storage, storage of inventory and the like); network parameters (e.g., network bandwidth, input/output speeds, network utilization, network cost, network speed, network availability and the like); transmission parameters (e.g., quality of transmission of data, speed of transmission of data, error rates in transmission, cost of transmission and the like); security parameters (e.g., number and/or type of exposure events; vulnerability to attack, data loss, data breach, access parameters, and the like); location and positioning parameters (e.g., location of data collectors, location of workers, location of machines and equipment, location of inventory units, location of parts and materials, location of network access points, location of ingress and egress points, location of landing positions, location of sensor sets, location of network infrastructure, location of power sources and the like); input selection parameters, data combination parameters (e.g., for multiplexing, extraction, transformation, loading, and the like); power parameters; states (e.g., operating modes, availability states, environmental states, fault modes, maintenance modes, anticipated states); events; and equipment specifications. With respect to states, operating modes may include mobility modes (direction, speed, acceleration, and the like), type of mobility modes (e.g., rolling, flying, sliding, levitation, hovering, floating, and the like), performance modes (e.g., gears, rotational speeds, heat levels, assembly line speeds, voltage levels, frequency levels, and the like), output modes, fuel conversion modes, resource consumption modes, and financial performance modes (e.g., yield, profitability, and the like). Availability states may refer to anticipating conditions that could cause machine to go offline or require backup. Environmental states may refer to ambient temperature, ambient humidity/moisture, ambient pressure, ambient wind/fluid flow, presence of pollution or contaminants, presence of interfering elements (e.g., electrical noise, vibration), power availability, and power quality. Anticipated states may include: achieving or not achieving a desired goal, such as a specified/threshold output production rate, a specified/threshold generation rate, an operational efficiency/ failure rate, a financial efficiency/-profit goal, a power efficiency/resource utilization; an avoidance of a fault condition (e.g., overheating, slow performance, excessive speed, excessive motion, excessive vibration/oscillation, excessive acceleration, expansion/contraction, electrical failure, running out of stored power/fuel, overpressure, excessive radiation/-melt down, fire, freezing, failure of fluid flow (e.g., stuck valves, frozen fluids); mechanical failures (e.g., broken component, worn component, faulty coupling, misalignment, asymmetries/deflection, damaged component (e.g., deflection, strain, stress, cracking], imbalances, collisions, jammed elements, and lost or slipping chain or belt); avoidance of a dangerous condition or catastrophic failure; and availability (online status).

The expert system may comprise or be seeded with a model that predicts an outcome or state given a set of data (which may comprise inputs from sensors, such as via a data collector, as well as other data, such as from system components, from external systems and from external data sources). For example, the model may be an operating model for an industrial environment, machine, or workflow. In another example, the model may be for anticipating states, for predicting fault and optimizing maintenance, for self-organizing storage (e.g., on devices, in data pools and/or in the cloud), for optimizing data transport (such as for optimizing network coding, network-condition-sensitive routing, and the like), for optimizing data marketplaces, and the like.

The iteration of the expert system may result in any number of downstream actions based on analysis of data from the smart band. In an embodiment, the expert system may determine that the system should either keep or modify operational parameters, equipment or a weighting of a neural net model given a desired goal, such as a specified/threshold output production rate, specified/threshold generation rate, an operational efficiency/failure rate, a financial efficiency/profit goal, a power efficiency/resource utilization, an avoidance of a fault condition, an avoidance of a dangerous condition or catastrophic failure, and the like. In embodiments, the adjustments may be based on determining context of an industrial system, such as understanding a type of equipment, its purpose, its typical operating modes, the functional specifications for the equipment, the relationship of the equipment to other features of the environment (including any other systems that provide input to or take input from the equipment), the presence and role of operators (including humans and automated control systems), and ambient or environmental conditions. For example, in order to achieve a profit goal, a pipeline in a refinery may need to operate for a certain amount of time a day and/or at a certain flow rate. The expert system may be seeded with a model for operation of the pipeline in a manner that results in a specified profit goal, such as indicating a given flow rate of material through the pipeline based on the current market sale price for the material and the cost of getting the material into the pipeline. As it acquires data and iterates, the model will predict whether the profit goal will be achieved given the current data. Based on the results of the iteration of the expert system, a recommendation may be made (or a control instruction may be automatically provided) to operate the pipeline at a higher flow rate, to keep it operational for longer or the like. Further, as the system iterates, one or more additional sensors may be sampled in the model to determine if their addition to the smart band would improve predicting a state. **In** another embodiment, the expert system may determine that the system should either keep or modify operational parameters, equipment or a weighting of a neural net or other model given a constraint of operation (e.g., meeting a required endpoint (e.g., delivery date, amount, cost, coordination with another system), operating with a limited resource (e.g., power, fuel, battery), storage (e.g., data storage), bandwidth (e.g., local network, p2p, WAN, internet bandwidth, availability, or input/output capacity), authorization (e.g., role-based)), a warranty limitation, a manufacturer's guideline, a maintenance guideline). For example, a constraint of operating a boiler in a refinery is that the aeration of the boiler feedwater needs to be reduced in the cycle; therefore, the boiler must coordinate with the deaerator. In this example, the expert system is seeded with a model for operation of the boiler in coordination with the deaerator that results in a specified overall performance. As sensor data from the system is acquired, the expert system may determine that an aspect of one or both of the boiler and aerator must be changed to continue to achieve the specific overall performance. In a further embodiment, the expert system may determine that the system should either keep or modify operational parameters, equipment or a weighting of a neural net model given an identified choke point. In still another embodiment, the expert system may determine that the system should either keep or modify operational parameters, equipment or a weighting of a neural net model given an off-nominal operation. For example, a reciprocating compressor in a refinery that delivers gases at high pressure may be measured as having an off-nominal operation by sensors that feed their data into an expert system (optionally including a neural net or other machine learning system). As the expert system iterates and receives the off-nominal data, it may predict that the refinery will not achieve a specified goal and will recommend an action, such as taking the reciprocating compressor offline for maintenance. In another embodiment, the expert system may determine that the system should collect more/fewer data points from one or more sensors. For example, an anchor agitator in a pharmaceutical processing plant may be programmed to agitate the contents of a tank until a certain level of viscosity (e.g., as measured in centipoise) is obtained. As the expert system collects data throughout the run indicating an increase in viscosity, the expert system may recommend collecting additional data points to confirm a predicted state in the face of the increased strain on the plant systems from the viscosity. In yet another embodiment, the expert system may determine that the system should change a data storage technique. In still another example, the expert system may determine that the system should change a data presentation mode or manner. In a further embodiment, the expert system may determine that the system should apply one or more filters (low pass, high pass, band pass, etc.) to collected data. In yet a further embodiment, the expert system may determine that the system should collect data from a new smart band/new set of sensors and/or begin measuring a new aspect that the neural net identified itself. For example, various measurements may be made of paddle-type agitator mixers operating in a pharmaceutical plant, such as mixing times, temperature, homogeneous substrate distribution, heat exchange with internal structures and the tank wall or oxygen transfer rate, mechanical stress, forces and torques on agitator vessels and internal structures, and the like. Various sensor data streams may be included in a smart band monitoring these various aspects of the paddle-type agitator mixer, such as a flow meter, a thermometer, and others. As the expert system iterates, perhaps having been seeded with minimal data from during the agitator's run, a new aspect of the operation may become apparent, such as the impact of pH on the state of the run. Thus, a new smart band will be identified by the expert system that includes sensor data from a pH meter. In yet still a further embodiment, the expert system may determine that the system should discontinue collection of data from a smart band, one or more sensors, or the like. In another embodiment, the expert system may determine that the system should initiate data collection from a new smart band, such as a new smart band identified by the neural net itself. In yet another embodiment, the expert system may determine that the system should adjust the weights/biases of a model used by the expert system. In still another embodiment, the expert system may determine that the system should remove/re-task under-utilized equipment. For example, a plurality of agitators working with a pump blasting liquid in a pharmaceutical processing plant may be monitored during operation of the plant by the expert system. Through iteration of the expert system seeded with data from a run of the plant with the agitators, the expert system may predict that a state will be achieved even if one or more agitators are taken out of service.

In embodiments, a monitoring system for data collection in an industrial environment may include a plurality of input sensors, such as any of those described herein, communicatively coupled to a data collector having a controller. The monitoring system may include a data collection band circuit structured to determine at least one subset of the plurality of sensors from which to process output data. The monitoring system may also include a machine learning data analysis circuit structured to receive output data from the at least one subset of the plurality of sensors and learn received output data patterns indicative of a state. In some embodiments, the data collection band circuit may alter the at least one subset of the plurality of sensors, or an aspect thereof, based on one or more of the learned received output data patterns and the state. In certain embodiments, the machine learning data analysis circuit is seeded with a model that enables it to learn data patterns. The model may be a physical model, an operational model, a system model, and the like. In other embodiments, the machine learning data analysis circuit is structured for deep learning wherein input data is fed to the circuit with no or minimal seeding and the machine learning data analysis circuit learns based on output feedback. For example, a static mixer in a chemical processing plant producing polymers may be used to facilitate the polymerization reaction. The static mixer may employ turbulent or laminar flow in its operation. Minimal data, such as heat transfer, velocity of flow out of the mixer, Reynolds number or pressure drop, acquired during the operation of the static mixer may be fed into the expert system which may iterate towards a prediction based on initial feedback (e.g., viscosity of the polymer, color of the polymer, reactivity of the polymer).

There may be a balance of multiple goals/guidelines in the management of smart bands by the expert system. For example, a repair and maintenance organization (RMO) may have operating parameters designed for maintenance of a storage tank in a refinery, while the owner of the refinery may have particular operating parameters for the storage tank that are designed for meeting a production goal. These goals, in this example relating to a maintenance goal or a production output, may be tracked by a different data collection bands. For example, maintenance of a storage tank may be tracked by sensors including a vibration transducer and a strain gauge, while the production goal of a storage tank may be tracked by sensors including a temperature sensor and a flow meter. The expert system may (optionally using a neural net, machine learning system, deep learning system, or the like, which may occur under supervision by one or more supervisors (human or automated)) intelligently manage bands aligned with different goals and assign weights, parameter modifications, or recommendations based on a factor, such as a bias towards one goal or a compromise to allow better alignment with all goals being tracked, for example. Compromises among the goals delivered to the expert system may be based on one or more hierarchies or rules (relating to the authority, role, criticality, or the like) of the applicable goals. In embodiments, compromises among goals may be optimized using machine learning, such as a neural net, deep learning system, or other artificial intelligence system as described throughout this disclosure. In one illustrative example, in a chemical processing plant where a gas-powered agitator is operating, the expert system may manage multiple smart bands, such as one directed to detecting the operational status of the gas-powered agitator, one directed at identifying a probability of hitting a production goal, and one directed at determining if the operation of the gas-powered agitator is meeting a fuel efficiency goal. Each of these smart bands may be populated with different sensors or data from different sensors (e.g., a vibration transducer to indicate operational status, a flow meter to indicate production goal, and a fuel gauge to indicate a fuel efficiency) whose output data are indicative of an aspect of the particular goal. Where a single sensor or a set of sensors is helpful for more than one goal, overlapping smart bands (having some sensors in common and other sensors not in common) may take input from that sensor or set of sensors, as managed by the smart band platform 10722. If there are constraints on data collection (such as due to power limitations, storage limitations, bandwidth limitations, input/output processing capabilities, or the like), a rule may indicate that one goal (e.g., a fuel utilization goal or a pollution reduction goal that is mandated by law or regulation) takes precedence, such that the data collection for the smart bands associated with that goal are maintained as others are paused or shut down. Management of prioritization of goals may be hierarchical or may occur by machine learning. The expert system may be seeded with models, or may not be seeded at all, in iterating towards a predicted state (i.e., meeting the goal) given the current data it has acquired. In this example, during operation of the gas-powered agitator, the plant owner may decide to bias the system towards fuel efficiency. All of the bands may still be monitored, but as the expert system iterates and predicts that the system will not meet or is not meeting a particular goal, and then offers recommended changes directed at increasing the chance of meeting the goal, the plant owner may structure the system with a bias towards fuel efficiency so that the recommended changes to parameters affecting fuel efficiency are made in favor of making other recommended changes.

In embodiments, the expert system may continue iterating in a deep-learning fashion to arrive at a single smart band, after being seeded with more than one smart band, that optimizes meeting more than one goal. For example, there may be multiple goals tracked for a thermic heating system in a chemical processing or a food processing plant, such as thermal efficiency and economic efficiency. Thermal efficiency for the thermic heating system may be expressed by comparing BTUs put in to the system, which can be obtained by knowing the amount of and quality of the fuel being used, and the BTUs out of the system, which is calculated using the flow out of the system and the temperature differential of materials in and out of the system. Economic efficiency of the thermic heating system may be expressed as the ratio between costs to run the system (including fuel, labor, materials, and services) and energy output from the system for a period of time. Data used to track thermal efficiency may include data from a flow meter, quality data point(s), and a thermometer, and data used to track economic efficiency may be an energy output from the system (e.g., kWh) and costs data. These data may be used in smart bands by the expert system to predict states, however, the expert system may iterate toward a smart band that is optimized to predict states related to both thermal and economic efficiency. The new smart band may include data used previously in the individual smart bands but may also use new data from different sensors or data sources. In embodiments, the expert system may be seeded with a plurality of smart bands and iterate to predict various states, but may also iterate towards reducing the number of smart bands needed to predict the same set of states.

Iteration of the expert system may be governed by rules, in some embodiments. For example, the expert system may be structured to collect data for seeding at a predetermined frequency. The expert system may be structured to iterate at least a number of times, such as when a new component/equipment/fuel source is added, when a sensor goes off-line, or as standard practice. For example, when a sensor measuring the rotation of a stirrer in a food processing line goes off-line and the expert system begins acquiring data from a new sensor measuring the same data points, the expert system may be structured to iterate for a number of times before the state is utilized in or allowed to affect any downstream actions. The expert system may be structured to train off-line or train *in situ*/online. The expert system may be structured to include static and/or manually input data in its smart bands. For example, an expert system managing smart bands associated with a mixer in a food processing plant may be structured to iterate towards predicting a duration of mixing before the food being processed achieves a particular viscosity, wherein the smart band includes data regarding the speed of the mixer, temperature of its contents, viscometric measurements and the required endpoint for viscosity and temperature of the food. The expert system may be structured to include a minimum/maximum number of variables.

In embodiments, the expert system may be overruled. In embodiments, the expert system may revert to prior band settings, such as in the event the expert system fails, such as if a neural network fails in a neural net expert system, if uncertainty is too high in a model-based system, if the system is unable to resolve conflicting rules in rule-based system, or the system cannot converge on a solution in any of the foregoing. For example, sensor data on an irrigation system used by the expert system in a smart band may indicate a massive leak in the field, but visual inspection, such as by a drone, indicates no such leak. In this event, the expert system will revert to an original smart band for seeding the expert system. In another example, one or more point sensors on an industrial pressure cooker indicates imminent failure in a seal, but the data collection band that the expert system converged to with a weighting towards a performance metric did not identify the failure. In this event, the smart band will revert to an original setting or a version of the smart band that would have also identified the imminent failure of the pressure cooker seal. In embodiments, the expert system may change smart band settings in the event that a new component is added that makes the system closer to a different offset system. For example, a vacuum distillation unit is added to an oil & gas refinery to distill naphthalene, but the current smart band settings for the expert system are derived from a refinery that distills kerosene. In this example, a data structure with smart band settings for various offset systems may be searched for a system that is more closely matched to the current system. When a new offset system is identified as more closely matched, such as one that also distill naphthalene, the new smart band settings (e.g., which sensors to use, where to place them, how frequently to sample, what static data points are needed, etc. as described herein) are used to seed the expert system to iterate towards predicting a state for the system. In embodiments, the expert system may change smart band settings in the event that a new set of offset data is available from a third-party library. For example, a pharmaceutical processing plant may have optimized a catalytic reactor to operate in a highly efficient way and deposited the smart band settings in a data structure. The data structure may be continuously scanned for new smart bands that better aid in monitoring catalytic reactions and thus, result in optimizing the operation of the reactor.

In embodiments, the expert system may be used to uncover unknown variables. For example, the expert system may iterate to identify a missing variable to be used for further iterations, such as further neural net iterations. For example, an under-utilized tank in a legacy condensate/make-up water system of a power station may have an unknown capacity because it is inaccessible and no documentation exists on the tank. Various aspects of the tank may be measured by a swarm of sensors to arrive at an estimated volume (e.g., flow into a downstream space, duration of a dye traced solution to work through the system), then that volume can be fed into the neural net as a new variable in the smart band.

In embodiments, the location of expert system node locations may be on a machine, on a data collector (or a group of them), in a network infrastructure (enterprise or other), or in the cloud. In embodiments, there may be distributed neurons across nodes (e.g., machine, data collector, network, cloud).

In an aspect, a monitoring system 10700 for data collection in an industrial environment, comprising a plurality of input sensors 10702 communicatively coupled to a data collector 10704 having a controller 10706, a data collection band circuit 10708 structured to determine at least one collection parameter for at least one of the plurality of sensors 10702 from which to process output data 10710, and a machine learning data analysis circuit 10712 structured to receive output data 10710 from the at least one of the plurality of sensors 10702 and learn received output data patterns 10718 indicative of a state. The data collection band circuit 10708 alters the at least one collection parameter for the at least one of the plurality of sensors 10702 based on one or more of the learned received output data patterns 10718 and the state. The state may correspond to an outcome relating to a machine in the environment, an anticipated outcome relating to a machine in the environment, an outcome relating to a process in the environment, an anticipated outcome relating to a process in the environment, and the like. The collection parameter may be a bandwidth parameter, may be used to govern the multiplexing of a plurality of the input sensors, may be a timing parameter, may relate to a frequency range, may relate to the granularity of collection of sensor data, is a storage parameter for the collected data. The machine learning data analysis circuit may be structured to learn received output data patterns 10718 by being seeded with a model 10720, which may be a physical model, an operational model, or a system model. The machine learning data analysis circuit may be structured to learn received output data patterns 10718 based on the state. The data collection band circuit may alter the subset of the plurality of sensors when the learned received output data pattern does not reliably predict the state, which may include discontinuing collection of data from the at least one subset.

The monitoring system 10700 may keep or modify operational parameters of an item of equipment in the environment based on the determined state. The controller 10706 may adjust the weighting of the machine learning data analysis circuit 10712 based on the learned received output data patterns 10718 or the state. The controller 10706 may collect more/fewer data points from one or more members of the at least one subset of plurality of sensors 10702 based on the learned received output data patterns 10718 or the state. The controller 10706 may change a data storage technique for the output data 10710 based on the learned received output data patterns 10718 or the state. The controller 10706 may change a data presentation mode or manner based on the learned received output data patterns 10718 or the state. The controller 10706 may apply one or more filters to the output data 10710. The controller 10706 may identify a new data collection band circuit 10708 based on one or more of the learned received output data patterns 10718 and the state. The controller 10706 may adjust the weights/biases of the machine learning data analysis circuit 10712, such as in response to the learned received output data patterns 10718, in response to the accuracy of the prediction of an anticipated state by the machine learning data analysis circuit, in response to the accuracy of a classification of a state by the machine learning data analysis circuit, and the like. The monitoring device 10700 may remove or re-task under-utilized equipment based on one or more of the learned received output data patterns 10718 and the state. The machine learning data analysis circuit 10712 may include a neural network expert system. At least one subset of the plurality of sensors measures vibration and noise data. The machine learning data analysis circuit 10712 may be structured to learn received output data patterns 10718 indicative of progress/alignment with one or more goals/guidelines, wherein progress/alignment of each goal/guideline may be determined by a different subset of the plurality of sensors. The machine learning data analysis circuit 10712 may be structured to learn received output data patterns 10718 indicative of an unknown variable. The machine learning data analysis circuit 10712 may be structured to learn received output data patterns 10718 indicative of a preferred input among available inputs. The machine learning data analysis circuit 10712 may be structured to learn received output data patterns 10718 indicative of a preferred input data collection band among available input data collection bands. The machine learning data analysis circuit 10712 may be disposed in part on a machine, on one or more data collectors, in network infrastructure, in the cloud, or any combination thereof.

In embodiments, a monitoring device for data collection in an industrial environment may include a plurality of input sensors 10702 communicatively coupled to a controller 10706, the controller 10706 including a data collection band circuit 10708 structured to determine at least one subset of the plurality of sensors 10702 from which to process output data 10710; and a machine learning data analysis circuit 10712 structured to receive output data from the at least one subset of the plurality of sensors 10702 and learn received output data patterns 10718 indicative of a state, wherein the data collection band circuit 10708 alters an aspect of the at least one subset of the plurality of sensors 10702 based on one or more of the learned received output data patterns 10718 and the state. The aspect that the data collection band circuit 10708 alters is a number or a frequency of data points collected from one or more members of the at least one subset of plurality of sensors 10702. The aspect that the data collection band circuit 10708 alters is a bandwidth parameter, a timing parameter, a frequency range, a granularity of collection of sensor data, a storage parameter for the collected data, and the like.

In an embodiment, a monitoring system 10700 for data collection in an industrial environment may include a plurality of input sensors 10702 communicatively coupled to a data collector 10704 having a controller 10706, a data collection band circuit 10708 structured to determine at least one collection parameter for at least one of the plurality of sensors 10702 from which to process output data 10710, and a machine learning data analysis circuit 10712 structured to receive output data 10710 from the at least one of the plurality of sensors 10702 and learn received output data patterns indicative of a state, wherein the data collection band circuit 10708 alters the at least one collection parameter for the at least one of the plurality of sensors 10702 based on one or more of the learned received output data patterns 10718 and the state, and wherein the data collection band circuit 10708 alters the at least one of the plurality of sensors 10702 when the learned received output data pattern 10718 does not reliably predict the state.

In an embodiment, a monitoring system 10700 for data collection in an industrial environment may include a plurality of input sensors 10702 communicatively coupled to a data collector 10704 having a controller 10706, a data collection band circuit 10708 structured to determine at least one collection parameter for at least one of the plurality of sensors 10702 from which to process output data 10710, and a machine learning data analysis circuit 10712 structured to receive output data 10710 from the at least one of the plurality of sensors 10702 and learn received output data patterns 10718 indicative of a state, wherein the data collection band circuit 10708 alters the at least one collection parameter for the at least one of the plurality of sensors 10702 based on one or more of the learned received output data patterns 10718 and the state, and wherein the data collector 10704 collects more or fewer data points from the at least one of the plurality of sensors 10702 based on the learned received output data patterns 10718 or the state.

In an embodiment, a monitoring system 10700 for data collection in an industrial environment may include a plurality of input sensors 10702 communicatively coupled to a data collector 10704 having a controller 10706, a data collection band circuit 10708 structured to determine at least one collection parameter for at least one of the plurality of sensors 10702 from which to process output data 10710, and a machine learning data analysis circuit 10712 structured to receive output data 10710 from the at least one of the plurality of sensors 10702 and learn received output data 10710 patterns indicative of a state, wherein the data collection band circuit 10708 alters the at least one collection parameter for the at least one of the plurality of sensors 10702 based on one or more of the learned received output data patterns 10718 and the state, and wherein the controller 10706 changes a data storage technique for the output data 10710 based on the learned received output data patterns 10718 or the state.

In an embodiment, a monitoring system 10700 for data collection in an industrial environment may include a plurality of input sensors 10702 communicatively coupled to a data collector 10704 having a controller 10706, a data collection band circuit 10708 structured to determine at least one collection parameter for at least one of the plurality of sensors 10702 from which to process output data 10710, and a machine learning data analysis circuit 10712 structured to receive output data 10710 from the at least one of the plurality of sensors 10702 and learn received output data patterns 10718 indicative of a state, wherein the data collection band circuit 10708 alters the at least one collection parameter for the at least one of the plurality of sensors 10702 based on one or more of the learned received output data patterns 10718 and the state, and wherein the controller 10706 changes a data presentation mode or manner based on the learned received output data patterns 10718 or the state.

In an embodiment, a monitoring system 10700 for data collection in an industrial environment may include a plurality of input sensors 10702 communicatively coupled to a data collector 10704 having a controller 10706, a data collection band circuit 10708 structured to determine at least one collection parameter for at least one of the plurality of sensors 10702 from which to process output data 10710, and a machine learning data analysis circuit 10712 structured to receive output data 10710 from the at least one of the plurality of sensors 10702 and learn received output data patterns 10718 indicative of a state, wherein the data collection band circuit 10708 alters the at least one collection parameter for the at least one of the plurality of sensors 10702 based on one or more of the learned received output data patterns 10718 and the state, and wherein the controller 10706 identifies a new data collection band circuit 10708 based on one or more of the learned received output data patterns 10718 and the state.

In an embodiment, a monitoring system 10700 for data collection in an industrial environment may include a plurality of input sensors 10702 communicatively coupled to a data collector 10704 having a controller 10706, a data collection band circuit 10708 structured to determine at least one collection parameter for at least one of the plurality of sensors 10702 from which to process output data 10710, and a machine learning data analysis circuit 10712 structured to receive output data 10710 from the at least one of the plurality of sensors 10702 and learn received output data patterns 10718 indicative of a state, wherein the data collection band circuit 10708 alters the at least one collection parameter for the at least one of the plurality of sensors 10702 based on one or more of the learned received output data patterns 10718 and the state, and wherein the controller 10706 adjusts the weights/biases of the machine learning data analysis circuit 10712. The adjustment may be in response to the learned received output data patterns, in response to the accuracy of the prediction of an anticipated state by the machine learning data analysis circuit, in response to the accuracy of a classification of a state by the machine learning data analysis circuit, and the like.

In an embodiment, a monitoring system 10700 for data collection in an industrial environment may include a plurality of input sensors 10702 communicatively coupled to a data collector 10704 having a controller 10706, a data collection band circuit 10708 structured to determine at least one collection parameter for at least one of the plurality of sensors 10702 from which to process output data 10710, and a machine learning data analysis circuit 10712. This machine learning data analysis circuit is structured to receive output data 10710 from the at least one of the plurality of sensors 10702 and learn received output data patterns 10718 indicative of a state, wherein the data collection band circuit 10708 alters the at least one collection parameter for the at least one of the plurality of sensors 10702 based on one or more of the learned received output data patterns 10718 and the state, and wherein the machine learning data analysis circuit 10712 is structured to learn received output data patterns 10718 indicative of progress or alignment with one or more goals or guidelines.

Clause 1. In embodiments, a monitoring system for data collection in an industrial environment, comprising: a plurality of input sensors communicatively coupled to a data collector having a controller; a data collection band circuit structured to determine at least one collection parameter for at least one of the plurality of sensors from which to process output data; and a machine learning data analysis circuit structured to receive output data from the at least one of the plurality of sensors and learn received output data patterns indicative of a state, wherein the data collection band circuit alters the at least one collection parameter for the at least one of the plurality of sensors based on one or more of the learned received output data patterns and the state. 2. The system of clause 1, wherein the state corresponds to an outcome relating to a machine in the environment. 3. The system of clause 1, wherein the state corresponds to an anticipated outcome relating to a machine in the environment. 4. The system of clause 1, wherein the state corresponds to an outcome relating to a process in the environment. 5. The system of clause 1, wherein the state corresponds to an anticipated outcome relating to a process in the environment. 6. The system of clause 1, wherein the collection parameter is a bandwidth parameter. 7. The system of clause 1, wherein the collection parameter is used to govern the multiplexing of a plurality of the input sensors. 8. The system of clause 1, wherein the collection parameter is a timing parameter. 9. The system of clause 1, wherein the collection parameter relates to a frequency range. 10. The system of clause 1, wherein the collection parameter relates to the granularity of collection of sensor data. 11. The system of clause 1, wherein the collection parameter is a storage parameter for the collected data. 12. The system of clause 1, wherein the machine learning data analysis circuit is structured to learn received output data patterns by being seeded with a model. 13. The system of clause 12, wherein the model is a physical model, an operational model, or a system model. 14. The system of clause 1, wherein the machine learning data analysis circuit is structured to learn received output data patterns based on the state. 15. The system of clause 1, wherein the data collection band circuit alters the subset of the plurality of sensors when the learned received output data pattern does not reliably predict the state. 16. The system of clause 15, wherein altering at least one subset comprises discontinuing collection of data from the at least one subset. 17. The system of clause 1, wherein the monitoring system keeps or modifies operational parameters of an item of equipment in the environment based on the determined state. 18. The system of clause 1, wherein the controller adjusts the weighting of the machine learning data analysis circuit based on the learned received output data patterns or the state. 19. The system of clause 1, wherein the controller collects more or fewer data points from one or more members of the at least one subset of plurality of sensors based on the learned received output data patterns or the state. 20. The system of clause 1, wherein the controller changes a data storage technique for the output data based on the learned received output data patterns or the state. 21. The system of clause 1, wherein the controller changes a data presentation mode or manner based on the learned received output data patterns or the state. 22. The system of clause 1, wherein the controller applies one or more filters to the output data. 23. The system of clause 1, wherein the controller identifies a new data collection band circuit based on one or more of the learned received output data patterns and the state. 24. The system of clause 1, wherein the controller adjusts the weights/biases of the machine learning data analysis circuit. 25. The system of clause 24, wherein the adjustment is in response to the learned received output data patterns. 26. The system of clause 24, wherein the adjustment is in response to the accuracy of the prediction of an anticipated state by the machine learning data analysis circuit. 27. The system of clause 24, wherein the adjustment is in response to the accuracy of a classification of a state by the machine learning data analysis circuit. 28. The system of clause 1, wherein the monitoring device removes/re-tasks under-utilized equipment based on one or more of the learned received output data patterns and the state. 29. The system of clause 1, wherein the machine learning data analysis circuit comprises a neural network expert system. 30. The system of clause 1, wherein the at least one subset of the plurality of sensors measure vibration and noise data. 31. The system of clause 1, wherein the machine learning data analysis circuit is structured to learn received output data patterns indicative of progress/alignment with one or more goals/guidelines. 32. The system of clause 31, wherein progress/alignment of each goal/guideline is determined by a different subset of the plurality of sensors. 33. The system of clause 1, wherein the machine learning data analysis circuit is structured to learn received output data patterns indicative of an unknown variable. 34. The system of clause 1, wherein the machine learning data analysis circuit is structured to learn received output data patterns indicative of a preferred input among available inputs. 35. The system of clause 1, wherein the machine learning data analysis circuit is structured to learn received output data patterns indicative of a preferred input data collection band among available input data collection bands. 36. The system of clause 1, wherein the machine learning data analysis circuit is disposed in part on a machine, on one or more data collectors, in network infrastructure, in the cloud, or any combination thereof. 37. A monitoring device for data collection in an industrial environment, comprising: a plurality of input sensors communicatively coupled to a controller, the controller comprising: a data collection band circuit structured to determine at least one subset of the plurality of sensors from which to process output data; and a machine learning data analysis circuit structured to receive output data from the at least one subset of the plurality of sensors and learn received output data patterns indicative of a state, wherein the data collection band circuit alters an aspect of the at least one subset of the plurality of sensors based on one or more of the learned received output data patterns and the state. 38. The system of clause 37, wherein the aspect that the data collection band circuit alters is a number of data points collected from one or more members of the at least one subset of plurality of sensors. 39. The system of clause 37, wherein the aspect that the data collection band circuit alters is a frequency of data points collected from one or more members of the at least one subset of plurality of sensors. 40. The system of clause 37, wherein the aspect that the data collection band circuit alters is a bandwidth parameter. 41. The system of clause 37, wherein the aspect that the data collection band circuit alters is a timing parameter. 42. The system of clause 37, wherein the aspect that the data collection band circuit alters relates to a frequency range. 43. The system of clause 37, wherein the aspect that the data collection band circuit alters relates to the granularity of collection of sensor data. 44. The system of clause 37, wherein the collection parameter is a storage parameter for the collected data. 45. A monitoring system for data collection in an industrial environment, comprising: a plurality of input sensors communicatively coupled to a data collector having a controller; a data collection band circuit structured to determine at least one collection parameter for at least one of the plurality of sensors from which to process output data; and a machine learning data analysis circuit structured to receive output data from the at least one of the plurality of sensors and learn received output data patterns indicative of a state, wherein the data collection band circuit alters the at least one collection parameter for the at least one of the plurality of sensors based on one or more of the learned received output data patterns and the state, and wherein the data collection band circuit alters the at least one of the plurality of sensors when the learned received output data pattern does not reliably predict the state. 46. A monitoring system for data collection in an industrial environment, comprising: a plurality of input sensors communicatively coupled to a data collector having a controller; a data collection band circuit structured to determine at least one collection parameter for at least one of the plurality of sensors from which to process output data; and a machine learning data analysis circuit structured to receive output data from the at least one of the plurality of sensors and learn received output data patterns indicative of a state, wherein the data collection band circuit alters the at least one collection parameter for the at least one of the plurality of sensors based on one or more of the learned received output data patterns and the state, and wherein the data collector collects more or fewer data points from the at least one of the plurality of sensors based on the learned received output data patterns or the state. 47. A monitoring system for data collection in an industrial environment, comprising: a plurality of input sensors communicatively coupled to a data collector having a controller; a data collection band circuit structured to determine at least one collection parameter for at least one of the plurality of sensors from which to process output data; and a machine learning data analysis circuit structured to receive output data from the at least one of the plurality of sensors and learn received output data patterns indicative of a state, wherein the data collection band circuit alters the at least one collection parameter for the at least one of the plurality of sensors based on one or more of the learned received output data patterns and the state, and wherein the controller changes a data storage technique for the output data based on the learned received output data patterns or the state. 48. A monitoring system for data collection in an industrial environment, comprising: a plurality of input sensors communicatively coupled to a data collector having a controller; a data collection band circuit structured to determine at least one collection parameter for at least one of the plurality of sensors from which to process output data; and a machine learning data analysis circuit structured to receive output data from the at least one of the plurality of sensors and learn received output data patterns indicative of a state, wherein the data collection band circuit alters the at least one collection parameter for the at least one of the plurality of sensors based on one or more of the learned received output data patterns and the state, and wherein the controller changes a data presentation mode or manner based on the learned received output data patterns or the state. 49. A monitoring system for data collection in an industrial environment, comprising: a plurality of input sensors communicatively coupled to a data collector having a controller; a data collection band circuit structured to determine at least one collection parameter for at least one of the plurality of sensors from which to process output data; and a machine learning data analysis circuit structured to receive output data from the at least one of the plurality of sensors and learn received output data patterns indicative of a state, wherein the data collection band circuit alters the at least one collection parameter for the at least one of the plurality of sensors based on one or more of the learned received output data patterns and the state, and wherein the controller identifies a new data collection band circuit based on one or more of the learned received output data patterns and the state. 50. A monitoring system for data collection in an industrial environment, comprising: a plurality of input sensors communicatively coupled to a data collector having a controller; a data collection band circuit structured to determine at least one collection parameter for at least one of the plurality of sensors from which to process output data; and a machine learning data analysis circuit structured to receive output data from the at least one of the plurality of sensors and learn received output data patterns indicative of a state, wherein the data collection band circuit alters the at least one collection parameter for the at least one of the plurality of sensors based on one or more of the learned received output data patterns and the state, and wherein the controller adjusts the weights/-biases of the machine learning data analysis circuit. 51. The system of clause 50, wherein the adjustment is in response to the learned received output data patterns. 52. The system of clause 50, wherein the adjustment is in response to the accuracy of the prediction of an anticipated state by the machine learning data analysis circuit. 53. The system of clause 50, wherein the adjustment is in response to the accuracy of a classification of a state by the machine learning data analysis circuit. 54. A monitoring system for data collection in an industrial environment, comprising: a plurality of input sensors communicatively coupled to a data collector having a controller; a data collection band circuit structured to determine at least one collection parameter for at least one of the plurality of sensors from which to process output data; and a machine learning data analysis circuit structured to receive output data from the at least one of the plurality of sensors and learn received output data patterns indicative of a state, wherein the data collection band circuit alters the at least one collection parameter for the at least one of the plurality of sensors based on one or more of the learned received output data patterns and the state, and wherein the machine learning data analysis circuit is structured to learn received output data patterns indicative of progress or alignment with one or more goals or guidelines.

As described elsewhere herein, an expert system in an industrial environment may use sensor data to make predictions about outcomes or states of the environment or items in the environment. Data collection may be of various types of data (e.g., vibration data, noise data and other sensor data of the types described throughout this disclosure) for event detection, state detection, and the like. For example, the expert system may utilize ambient noise, or the overall sound environment of the area and/or overall vibration of the device of interest, optionally in conjunction with other sensor data, in detecting or predicting events or states. For example, a reciprocating compressor in a refinery, which may generate its own vibration, may also have an ambient vibration through contact with other aspects of the system.

In embodiments, all three types of noise (ambient noise, local noise and vibration noise) including various subsets thereof and combinations with other types of data, may be organized into large data sets, along with measured results, that are processed by a "deep learning" machine/expert system that learns to predict one or more states (e.g., maintenance, failure, or operational) or overall outcomes, such as by learning from human supervision or from other feedback, such as feedback from one or more of the systems described throughout this disclosure and the documents incorporated by reference herein.

Throughout this disclosure, various examples will involve machines, components, equipment, assemblies, and the like, and it should be understood that the disclosure could apply to any of the aforementioned. Elements of these machines operating in an industrial environment (e.g., rotating elements, reciprocating elements, swinging elements, flexing elements, flowing elements, suspending elements, floating elements, bouncing elements, bearing elements, etc.) may generate vibrations that may be of a specific frequency and/or amplitude typical of the element when the element is in a given operating condition or state (e.g., a normal mode of operation of a machine at a given speed, in a given gear, or the like). Changes in a parameter of the vibration may be indicative or predictive of a state or outcome of the machine. Various sensors may be useful in measuring vibration, such as accelerometers, velocity transducers, imaging sensors, acoustic sensors, and displacement probes, which may collectively be known as vibration sensors. Vibration sensors may be mounted to the machine, such as permanently or temporarily (e.g., adhesive, hook-and-loop, or magnetic attachment), or may be disposed on a mobile or portable data collector. Sensed conditions may be compared to historical data to identify or predict a state, condition or outcome. Typical faults that can be identified using vibration analysis include: machine out of balance, machine out of alignment, resonance, bent shafts, gear mesh disturbances, blade pass disturbances, vane pass disturbances, recirculation & cavitation, motor faults (rotor & stator), bearing failures, mechanical looseness, critical machine speeds, and the like, as well as excessive friction, clutch slipping, belt problems, suspension and shock absorption problems, valve and other fluid leaks, under-pressure states in lubrication and other fluid systems, overheating (such as due to many of the above), blockage or freezing of engagement of mechanical systems, interference effects, and other faults described throughout this disclosure and in the documents incorporated by reference.

Given that machines are frequently found adjacent to or working in concert with other machinery, measuring the vibration of the machine may be complicated by the presence of various noise components in the environment or associated vibrations that the machine may be subjected to. Indeed, the ambient and/or local environment may have its own vibration and/or noise pattern that may be known. In embodiments, the combination of vibration data with ambient and/or local noise or other ambient sensed conditions may form its own pattern, as will be further described herein.

In embodiments, measuring vibration noise may involve one or more vibration sensors on or in a machine to measure vibration noise of the machine that occurs continuously or periodically. Analysis of the vibration noise may be performed, such as filtering, signal conditioning, spectral analysis, trend analysis, and the like. Analysis may be performed on aggregate or individual sensor measurements to isolate vibration noise of equipment to obtain a characteristic vibration, vibration pattern or "vibration fingerprint" of the machine. The vibration fingerprints may be stored in a data structure, or library, of vibration fingerprints. The vibration fingerprints may include frequencies, spectra (i.e., frequency vs. amplitude), velocities, peak locations, wave peak shapes, waveform shapes, wave envelope shapes, accelerations, phase information, phase shifts (including complex phase measurements) and the like. Vibration fingerprints may be stored in the library in association with a parameter by which it may be searched or sorted. The parameters may include a brand or type of machine/component/equipment, location of sensor(s) attachment or placement, duty cycle of the equipment/machine, load sharing of the equipment/machine, dynamic interactions with other devices, RPM, flow rate, pressure, other vibration driving characteristic, voltage of line power, age of equipment, time of operation, known neighboring equipment, associated auxiliary equipment/components, size of space equipment is in, material of platform for equipment, heat flux, magnetic fields, electrical fields, currents, voltage, capacitance, inductance, aspect of a product, and combinations (e.g., simple ratios) of the same. Vibration fingerprints may be obtained for machines under normal operation or for other periods of operation (e.g., off-nominal operation, malfunction, maintenance needed, faulty component, incorrect parameters of operation, other conditions, etc.) and can be stored in the library for comparison to current data. The library of vibration fingerprints may be stored as indicators with associated predictions, states, outcomes and/or events. Trend analysis data of measured vibration fingerprints can indicate time between maintenance events/failure events.

In embodiments, vibration noise may be used by the expert system to confirm the status of a machine, such as a favorable operation, a production rate, a generation rate, an operational efficiency, a financial efficiency (e.g., output per cost), a power efficiency, and the like. In embodiments, the expert system may make a comparison of the vibration noise with a stored vibration fingerprint. In other embodiments, the expert system may be seeded with vibration noise and initial feedback on states and outcomes in order to learn to predict other states and outcomes. For example, a center pivot irrigation system may be remotely monitored by attached vibration sensors to provide a measured vibration noise that can be compared to a library of vibration fingerprints to confirm that the system is operating normally. If the system is not operating normally, the expert system may automatically dispatch a field crew or drone to investigate. In another example of a vacuum distillation unit in a refinery, the vibration noise may be compared, such as by the expert system, to stored vibration fingerprints in a library to confirm a production rate of diesel. In a further example, the expert system may be seeded with vibration noise for a pipeline under conditions of a normal production rate and as the expert system iterates with current data (e.g., altered vibration noise, and possibly other altered parameters), it may predict that the production rate has increased as caused by the alterations. Measurements may be continually analyzed in this way to remotely monitor operation.

In embodiments, vibration noise may be compared, such as by the expert system, to stored vibration fingerprints and associated states and outcomes in the library, or alternatively, may be used to seed an expert system to predict when maintenance is required (e.g., off-nominal measurement, artifacts in signal, etc.), such as when vibration noise is matched to a condition when the equipment/component required maintenance, vibration noise exceeds a threshold/limit, vibration noise exceeds a threshold/limit or matches a library vibration fingerprint together with one or more additional parameters, as described herein. For example, when the vibration fingerprint from a turbine agitator in a pharmaceutical processing plant matches a vibration fingerprint for a turbine agitator when it required a replacement bearing, the expert system may cause an action to occur, such as immediately shutting down the agitator or scheduling its shutdown and maintenance.

In embodiments, vibration noise may be compared, such as by the expert system, to stored vibration fingerprints and associated states and outcomes in the library, or alternatively, may be used to seed an expert system to predict a failure or an imminent failure. For example, vibration noise from a gas agitator in a pharmaceutical processing plant may be matched to a condition when the agitator previously failed or was about to fail. In this example, the expert system may immediately shut down the agitator, schedule its shutdown, or cause a backup agitator to come online. In another example, vibration noise from a pump blasting liquid agitator in a chemical processing plant may exceed a threshold or limit and the expert system may cause an investigation into the cause of the excess vibration noise, shut down the agitator, or the like. In another example, vibration noise from an anchor agitator in a pharmaceutical processing plant may exceed a threshold/limit or match a library vibration fingerprint together with one or more additional parameters (see parameters herein), such as a decreased flow rate, increased temperature, or the like. Using vibration noise taken together with the parameters, the expert system may more reliably predict the failure or imminent failure.

In embodiments, vibration noise may be compared, such as by the expert system, to stored vibration fingerprints and associated states and outcomes in the library, or alternatively, may be used to seed an expert system to predict or diagnose a problem (e.g., unbalanced, misaligned, worn, or damaged) with the equipment or an external source contributing vibration noise to the equipment. For example, when the vibration noise from a paddle-type agitator mixer matches a vibration fingerprint from a prior imbalance, the expert system may immediately shut down the mixer.

In embodiments, when the expert system makes a prediction of an outcome or state using vibration noise, the expert system may perform a downstream action, or cause it to be performed. Downstream actions may include: triggering an alert of a failure, imminent failure, or maintenance event; shutting down equipment/-component; initiating maintenance/lubrication/alignment; deploying a field technician; recommending a vibration absorption/dampening device; modifying a process to utilize backup equipment/component; modifying a process to preserve products/reactants, etc.; generating/modifying a maintenance schedule; coupling the vibration fingerprint with duty cycle of the equipment, RPM, flow rate, pressure, temperature or other vibration-driving characteristic to obtain equipment/component status and generate a report, and the like. For example, vibration noise for a catalytic reactor in a chemical processing plant may be matched to a condition when the catalytic reactor required maintenance. Based on this predicted state of required maintenance, the expert system may deploy a field technician to perform the maintenance.

In embodiments, the library may be updated if a changed parameter resulted in a new vibration fingerprint, or if a predicted outcome or state did not occur in the absence of mitigation. In embodiments, the library may be updated if a vibration fingerprint was associated with an alternative state than what was predicted by the library. The update may occur after just one time that the state that actually occurred did not match the predicted state from the library. In other embodiments, it may occur after a threshold number of times. In embodiments, the library may be updated to apply one or more rules for comparison, such as rules that govern how many parameters to match along with the vibration fingerprint, or the standard deviation for the match in order to accept the predicted outcome.

In embodiments, vibration noise may be compared, such as by the expert system, to stored vibration fingerprints and associated states and outcomes in the library, or alternatively, may be used to seed an expert system to determine if a change in a system parameter external or internal to the machine has an effect on its intrinsic operation. In embodiments, a change in one or more of a temperature, flow rate, materials in use, duration of use, power source, installation, or other parameter (see parameters above) may alter the vibration fingerprint of a machine. For example, in a pressure reactor in a chemical processing plant, the flow rate and a reactant may be changed. The changes may alter the vibration fingerprint of the machine such that the vibration fingerprint stored in the library for normal operation is no longer correct.

Ambient noise, or the overall sound environment of the area and/or overall vibration of the device of interest, optionally in conjunction with other ambient sensed conditions, may be used in detecting or predicting events, outcomes, or states. Ambient noise may be measured by a microphone, ultrasound sensors, acoustic wave sensors, optical vibration sensors (e.g., using a camera to see oscillations that produce noise), or "deep learning" neural networks involving various sensor arrays that learn, using large data sets, to identify patterns, sounds types, noise types, etc. In an embodiment, the ambient sensed condition may relate to motion detection. For example, the motion may be a platform motion (e.g., vehicle, oil platform, suspended platform on land, etc.) or an object motion (e.g., moving equipment, people, robots, parts (e.g., fan blades or turbine blades), etc.). In an embodiment, the ambient sensed condition may be sensed by imaging, such as to detect a location and nature of various machines, equipment, and other objects, such as ones that might impact local vibration. In an embodiment, the ambient sensed condition may be sensed by thermal detection and imaging (e.g., for presence of people; presence of heat sources that may affect performance parameters, etc.). In an embodiment, the ambient sensed condition may be sensed by field detection (e.g., electrical, magnetic, etc.). In an embodiment, the ambient sensed condition may be sensed by chemical detection (e.g., smoke, other conditions). Any sensor data may be used by the expert system to provide an ambient sensed condition for analysis along with the vibration fingerprint to predict an outcome, event, or state. For example, an ambient sensed condition near a stirrer or mixer in a food processing plant may be the operation of a space heater during winter months, wherein the ambient sensed condition may include an ambient noise and an ambient temperature.

In an aspect, local noise may be the noise or vibration environment which is ambient, but known to be locally generated. The expert system may filter out ambient noise, employ common mode noise removal, and/or physically isolate the sensing environment.

In embodiments, a system for data collection in an industrial environment may use ambient, local and vibration noise for prediction of outcomes, events, and states. A library may be populated with each of the three noise types for various conditions (e.g., start up, shut down, normal operation, other periods of operation as described elsewhere herein). In other embodiments, the library may be populated with noise patterns representing the aggregate ambient, local, and/or vibration noise.

Analysis (e.g., filtering, signal conditioning, spectral analysis, trend analysis) may be performed on the aggregate noise to obtain a characteristic noise pattern and identify changes in noise pattern as possible indicators of a changed condition. A library of noise patterns may be generated with established vibration fingerprints and local and ambient noise that can be sorted by a parameter (see parameters herein), or other parameters/features of the local and ambient environment (e.g., company type, industry type, products, robotic handling unit present/not present, operating environment, flow rates, production rates, brand or type of auxiliary equipment (e.g., filters, seals, coupled machinery)). The library of noise patterns may be used by an expert system, such as one with machine learning capacity, to confirm a status of a machine, predict when maintenance is required (e.g., off-nominal measurement, artifacts in signal), predict a failure or an imminent failure, predict/diagnose a problem, and the like.

Based on a current noise pattern, the library may be consulted or used to seed an expert system to predict an outcome, event, or state based on the noise pattern. Based on the prediction, the expert system may one or more of trigger an alert of a failure, imminent failure, or maintenance event, shut down equipment/component/line, initiate maintenance/lubrication/alignment, deploy a field technician, recommend a vibration absorption/dampening device, modify a process to utilize backup equipment/component, modify a process to preserve products/reactants, etc., generate/modify a maintenance schedule, or the like.

For example, a noise pattern for a thermic heating system in a pharmaceutical plant or cooking system may include local, ambient, and vibration noise. The ambient noise may be a result of, for example, various pumps to pump fuel into the system. Local noise may be a result of a local security camera chirping with every detection of motion. Vibration noise may result from the combustion machinery used to heat the thermal fluid. These noise sources may form a noise pattern which may be associated with a state of the thermic system. The noise pattern and associated state may be stored in a library. An expert system used to monitor the state of the thermic heating system may be seeded with noise patterns and associated states from the library. As current data are received into the expert system, it may predict a state based on having learned noise patterns and associated states.

In another example, a noise pattern for boiler feed water in a refinery may include local and ambient noise. The local noise may be attributed to the operation of, for example, a feed pump feeding the feed water into a steam drum. The ambient noise may be attributed to nearby fans. These noise sources may form a noise pattern which may be associated with a state of the boiler feed water. The noise pattern and associated state may be stored in a library. An expert system used to monitor the state of the boiler may be seeded with noise patterns and associated states from the library. As current data are received into the expert system, it may predict a state based on having learned noise patterns and associated states.

In yet another example, a noise pattern for a storage tank in a refinery may include local, ambient, and vibration noise. The ambient noise may be a result of, for example, a pump that pumps a product into the tank. Local noise may be a result of a fan ventilating the tank room. Vibration noise may result from line noise of a power supply into the storage tank. These noise sources may form a noise pattern which may be associated with a state of the storage tank. The noise pattern and associated state may be stored in a library. An expert system used to monitor the state of the storage tank may be seeded with noise patterns and associated states from the library. As current data are received into the expert system, it may predict a state based on having learned noise patterns and associated states.

In another example, a noise pattern for condensate/make-up water system in a power station may include vibration and ambient noise. The ambient noise may be attributed to nearby fans. The vibration noise may be attributed to the operation of the condenser. These noise sources may form a noise pattern which may be associated with a state of the condensate/make-up water system. The noise pattern and associated state may be stored in a library. An expert system used to monitor the state of the condensate/makeup water system may be seeded with noise patterns and associated states from the library. As current data are received into the expert system, it may predict a state based on having learned noise patterns and associated states.

A library of noise patterns may be updated if a changed parameter resulted in a new noise pattern or if a predicted outcome or state did not occur in the absence of mitigation of a diagnosed problem. A library of noise patterns may be updated if a noise pattern resulted in an alternative state than what was predicted by the library. The update may occur after just one time that the state that actually occurred did not match the predicted state from the library. In other embodiments, it may occur after a threshold number of times. In embodiments, the library may be updated to apply one or more rules for comparison, such as rules that govern how many parameters to match along with the noise pattern, or the standard deviation for the match in order to accept the predicted outcome. For example, a baffle may be replaced in a static agitator in a pharmaceutical processing plant which may result in a changed noise pattern. In another example, as the seal on a pressure cooker in a food processing plant ages, the noise pattern associated with the pressure cooker may change.

In embodiments, the library of vibration fingerprints, noise sources and/or noise patterns may be available for subscription. The libraries may be used in offset systems to improve operation of the local system. Subscribers may subscribe at any level (e.g., component, machinery, installation, etc.) in order to access data that would normally not be available to them, such as because it is from a competitor, or is from an installation of the machinery in a different industry not typically considered. Subscribers may search on indicators/predictors based on or filtered by system conditions, or update an indicator/predictor with proprietary data to customize the library. The library may further include parameters and metadata auto-generated by deployed sensors throughout an installation, onboard diagnostic systems and instrumentation and sensors, ambient sensors in the environment, sensors (e.g., in flexible sets) that can be put into place temporarily, such as in one or more mobile data collectors, sensors that can be put into place for longer term use, such as being attached to points of interest on devices or systems, and the like.

In embodiments, a third party (e.g., RMOs, manufacturers) can aggregate data at the component level, equipment level, factory/installation level and provide a statistically valid data set against which to optimize their own systems. For example, when a new installation of a machine is contemplated, it may be beneficial to review a library for best data points to acquire in making state predictions. For example, a particular sensor package may be recommended to reliably determine if there will be a failure. For example, if vibration noise of equipment coupled with particular levels of local noise or other ambient sensed conditions reliably is an indicator of imminent failure, a given vibration transducer/temp/microphone package observing those elements may be recommended for the installation. Knowing such information may inform the choice to rent or buy a piece of machinery or associated warranties and service plans, such as based on knowing the quantity and depth of information that may be needed to reliably maintain the machinery.

In embodiments, manufacturers may utilize the library to rapidly collect in-service information for machines to draft engineering specifications for new customers.

In embodiments, noise and vibration data may be used to remotely monitor installs and automatically dispatch a field crew.

In embodiments, noise and vibration data may be used to audit a system. For example, equipment running outside the range of a licensed duty cycle may be detected by a suite of vibration sensors and/or ambient/local noise sensors. In embodiments, alerts may be triggered of potential out-of-warranty violations based on data from vibration sensors and/or ambient/local noise sensors.

In embodiments, noise and vibration data may be used in maintenance. This may be particularly useful where multiple machines are deployed that may vibrationally interact with the environment, such as two large generating machines on the same floor or platform with each other, such as in power generation plants.

In embodiments, a monitoring system 10800 for data collection in an industrial environment, may include a plurality of sensors 10802 selected among vibration sensors, ambient environment condition sensors and local sensors for collecting non-vibration data proximal to a machine in the environment, the plurality of sensors 10802 communicatively coupled to a data collector 10804, a data collection circuit 10808 structured to collect output data 10810 from the plurality of sensors 10802, and a machine learning data analysis circuit 10812 structured to receive the output data 10810 and learn received output data patterns 10814 predictive of at least one of an outcome and a state. The state may correspond to an outcome relating to a machine in the environment, an anticipated outcome relating to a machine in the environment, an outcome relating to a process in the environment, or an anticipated outcome relating to a process in the environment. The system may be deployed on the data collector 10804 or distributed between the data collector 10804 and a remote infrastructure. The data collector 10804 may include the data collection circuit 10808. The ambient environment condition or local sensors include one or more of a noise sensor, a temperature sensor, a flow sensor, a pressure sensor, a chemical sensor, a vibration sensor, an acceleration sensor, an accelerometer, a Pressure sensor, a force sensor, a position sensor, a location sensor, a velocity sensor, a displacement sensor, a temperature sensor, a thermographic sensor, a heat flux sensor, a tachometer sensor, a motion sensor, a magnetic field sensor, an electrical field sensor, a galvanic sensor, a current sensor, a flow sensor, a gaseous flow sensor, a non-gaseous fluid flow sensor, a heat flow sensor, a particulate flow sensor, a level sensor, a proximity sensor, a toxic gas sensor, a chemical sensor, a CBRNE sensor, a pH sensor, a hygrometer, a moisture sensor, a densitometer, an imaging sensor, a camera, an SSR, a triax probe, an ultrasonic sensor, a touch sensor, a microphone, a capacitive sensor, a strain gauge, an EMF meter, and the like.

In embodiments, a monitoring system 10800 for data collection in an industrial environment may include a data collection circuit 10808 structured to collect output data 10810 from a plurality of sensors 10802 selected among vibration sensors, ambient environment condition sensors and local sensors for collecting non-vibration data proximal to a machine in the environment, the plurality of sensors 10802 communicatively coupled to a data collection circuit 10808, and a machine learning data analysis circuit 10812 structured to receive the output data 10810 and learn received output data patterns 10814 predictive of at least one of an outcome and a state, wherein the monitoring system 10800 is structured to determine if the output data matches a learned received output data pattern. The machine learning data analysis circuit 10812 may be structured to learn received output data patterns 10814 by being seeded with a model 10816. The model 10816 may be a physical model, an operational model, or a system model. The machine learning data analysis circuit 10812 may be structured to learn received output data patterns 10814 based on the outcome or the state. The monitoring system 10700 keeps or modifies operational parameters or equipment based on the predicted outcome or the state. The data collection circuit 10808 collects more or fewer data points from one or more of the plurality of sensors 10802 based on the learned received output data patterns 10814, the outcome or the state. The data collection circuit 10808 changes a data storage technique for the output data based on the learned received output data patterns 10814, the outcome, or the state. The data collector 10804 changes a data presentation mode or manner based on the learned received output data patterns 10814, the outcome, or the state. The data collection circuit 10808 applies one or more filters (low pass, high pass, band pass, etc.) to the output data. The data collection circuit 10808 adjusts the weights/biases of the machine learning data analysis circuit 10812, such as in response to the learned received output data patterns 10814. The monitoring system 10800 removes/re-tasks under-utilized equipment based on one or more of the learned received output data patterns 10814, the outcome, or the state. The machine learning data analysis circuit 10812 may include a neural network expert system. The machine learning data analysis circuit 10812 may be structured to learn received output data patterns 10814 indicative of progress/alignment with one or more goals/guidelines, wherein progress/alignment of each goal/guideline is determined by a different subset of the plurality of sensors 10802. The machine learning data analysis circuit 10812 may be structured to learn received output data patterns 10814 indicative of an unknown variable. The machine learning data analysis circuit 10812 may be structured to learn received output data patterns 10814 indicative of a preferred input sensor among available input sensors. The machine learning data analysis circuit 10812 may be disposed in part on a machine, on one or more data collection circuits 10808, in network infrastructure, in the cloud, or any combination thereof. The output data 10810 from the vibration sensors forms a vibration fingerprint, which may include one or more of a frequency, a spectrum, a velocity, a peak location, a wave peak shape, a waveform shape, a wave envelope shape, an acceleration, a phase information, and a phase shift. The data collection circuit 10808 may apply a rule regarding how many parameters of the vibration fingerprint to match or the standard deviation for the match in order to identify a match between the output data 10810 and the learned received output data pattern. The state may be one of a normal operation, a maintenance required, a failure, or an imminent failure. The monitoring system 10800 may trigger an alert, shut down equipment/component/line, initiate maintenance/-lubrication/alignment based on the predicted outcome or state, deploy a field technician based on the predicted outcome or state, recommend a vibration absorption/-dampening device based on the predicted outcome or state, modify a process to utilize backup equipment/component based on the predicted outcome or state, and the like. The monitoring system 10800 may modify a process to preserve products/reactants, etc. based on the predicted outcome or state. The monitoring system 10800 may generate or modify a maintenance schedule based on the predicted outcome or state. The data collection circuit 10808 may include the data collection circuit 10808. The system may be deployed on the data collection circuit 10808 or distributed between the data collection circuit 10808 and a remote infrastructure.

In embodiments, a monitoring system 10800 for data collection in an industrial environment may include a data collection circuit 10808 structured to collect output data 10810 from a plurality of sensors 10802 selected among vibration sensors, ambient environment condition sensors and local sensors for collecting non-vibration data proximal to a machine in the environment, the plurality of sensors 10802 communicatively coupled to the data collection circuit 10808, and a machine learning data analysis circuit 10812 structured to receive the output data 10810 and learn received output data patterns 10814 predictive of at least one of an outcome and a state, wherein the monitoring system 10800 is structured to determine if the output data matches a learned received output data pattern and keep or modify operational parameters or equipment based on the determination.

In embodiments, a monitoring system 10800 for data collection in an industrial environment may include a data collection circuit 10808 structured to collect output data 10810 from the plurality of sensors 10802 selected among vibration sensors, ambient environment condition sensors and local sensors for collecting non-vibration data proximal to a machine in the environment, the plurality of sensors 10802 communicatively coupled to the data collection circuit 10808, and a machine learning data analysis circuit 10812 structured to receive the output data 10810 and learn received output data patterns 10814 predictive of at least one of an outcome and a state, wherein the output data 10810 from the vibration sensors forms a vibration fingerprint. The vibration fingerprint may include one or more of a frequency, a spectrum, a velocity, a peak location, a wave peak shape, a waveform shape, a wave envelope shape, an acceleration, a phase information, and a phase shift. The data collection circuit 10808 may apply a rule regarding how many parameters of the vibration fingerprint to match or the standard deviation for the match in order to identify a match between the output data 10810 and the learned received output data pattern. The monitoring system 10800 may be structured to determine if the output data matches a learned received output data pattern and keep or modify operational parameters or equipment based on the determination.

In embodiments, a monitoring system 10800 for data collection in an industrial environment may include a data collection band circuit 10818 that identifies a subset of the plurality of sensors 10802 from which to process output data, the sensors selected among vibration sensors, ambient environment condition sensors and local sensors for collecting non-vibration data proximal to a machine in the environment, the plurality of sensors 10802 communicatively coupled to a data collection band circuit 10818, a data collection circuit 10808 structured to collect the output data 10810 from the subset of plurality of sensors 10802, and a machine learning data analysis circuit 10812 structured to receive the output data 10810 and learn received output data patterns 10814 predictive of at least one of an outcome and a state, wherein when the learned received output data patterns 10814 do not reliably predict the outcome or the state, the data collection band circuit 10818 alters at least one parameter of at least one of the plurality of sensors 10802. A controller 10806 identifies a new data collection band circuit 10818 based on one or more of the learned received output data patterns 10814 and the outcome or state. The machine learning data analysis circuit 10812 may be further structured to learn received output data patterns 10814 indicative of a preferred input data collection band among available input data collection bands. The system may be deployed on the data collection circuit 10808 or distributed between the data collection circuit 10808 and a remote infrastructure.

In embodiments, a monitoring system for data collection in an industrial environment may include a data collection circuit 10808 structured to collect output data 10810 from a plurality of sensors 10802, the sensors selected among vibration sensors, ambient environment condition sensors and local sensors for collecting non-vibration data proximal to a machine in the environment, the plurality of sensors 10802 communicatively coupled to the data collection circuit 10808, wherein the output data 10810 from the vibration sensors is in the form of a vibration fingerprint, a data structure 10820 comprising a plurality of vibration fingerprints and associated outcomes, and a machine learning data analysis circuit 10812 structured to receive the output data 10810 and learn received output data patterns 10814 predictive of an outcome or a state based on processing of the vibration fingerprints. The machine learning data analysis circuit 10812 may be seeded with one of the plurality of vibration fingerprints from the data structure 10820. The data structure 10820 may be updated if a changed parameter resulted in a new vibration fingerprint or if a predicted outcome did not occur in the absence of mitigation. The data structure 10820 may be updated when the learned received output data patterns 10814 do not reliably predict the outcome or the state. The system may be deployed on the data collection circuit or distributed between the data collection circuit and a remote infrastructure.

In embodiments, a monitoring system 10800 for data collection in an industrial environment may include a data collection circuit 10808 structured to collect output data 10810 from a plurality of sensors 10802 selected among vibration sensors, ambient environment condition sensors and local sensors for collecting non-vibration data proximal to a machine in the environment, the plurality of sensors 10802 communicatively coupled to a data collection circuit 10808, wherein the output data 10810 from the plurality of sensors 10802 is in the form of a noise pattern, a data structure 10820 comprising a plurality of noise patterns and associated outcomes, and a machine learning data analysis circuit 10812 structured to receive the output data 10810 and learn received output data patterns 10814 predictive of an outcome or a state based on processing of the noise patterns.

In embodiments, a monitoring system for data collection in an industrial environment may comprise: a plurality of sensors selected among vibration sensors, ambient environment condition sensors and local sensors for collecting non-vibration data proximal to a machine in the environment, the plurality of sensors communicatively coupled to a data collector; a data collection circuit structured to collect output data from the plurality of sensors; and a machine learning data analysis circuit structured to receive the output data and learn received output data patterns predictive of at least one of an outcome and a state. The state may correspond to an outcome, anticipated outcome, outcome relating to a process, as relating to a machine in the environment. The system may be deployed on the data collector. The system may be distributed between the data collector and a remote infrastructure. The ambient environment condition sensors may include a noise sensor, a temperature sensor, a flow sensor, a pressure sensor, include a chemical sensor, a noise sensor, a temperature sensor, a flow sensor, a pressure sensor, a chemical sensor, a vibration sensor, an acceleration sensor, an accelerometer, a pressure sensor, a force sensor, a position sensor, a location sensor, a velocity sensor, a displacement sensor, a temperature sensor, a thermographic sensor, a heat flux sensor, a tachometer sensor, a motion sensor, a magnetic field sensor, an electrical field sensor, a galvanic sensor, a current sensor, a flow sensor, a gaseous flow sensor, a non-gaseous fluid flow sensor, a heat flow sensor, a particulate flow sensor, a level sensor, a proximity sensor, a toxic gas sensor, a chemical sensor, a CBRNE sensor, a pH sensor, a hygrometer, a moisture sensor, a densitometer, an imaging sensor, a camera, an SSR, a triax probe, an ultrasonic sensor, a touch sensor, a microphone, a capacitive sensor, a strain gauge, and an EMF meter. The local sensors may comprise one or more of a vibration sensor, an acceleration sensor, an accelerometer, a pressure sensor, a force sensor, a position sensor, a location sensor, a velocity sensor, a displacement sensor, a temperature sensor, a thermographic sensor, a heat flux sensor, a tachometer sensor, a motion sensor, a magnetic field sensor, an electrical field sensor, a galvanic sensor, a current sensor, a flow sensor, a gaseous flow sensor, a non-gaseous fluid flow sensor, a heat flow sensor, a particulate flow sensor, a level sensor, a proximity sensor, a toxic gas sensor, a chemical sensor, a CBRNE sensor, a pH sensor, a hygrometer, a moisture sensor, a densitometer, an imaging sensor, a camera, an SSR, a triax probe, an ultrasonic sensor, a touch sensor, a microphone, a capacitive sensor, a strain gauge, and an EMF meter.

In embodiments, a monitoring system for data collection in an industrial environment may comprise: a data collection circuit structured to collect output data from a plurality of sensors selected among vibration sensors, ambient environment condition sensors and local sensors for collecting non-vibration data proximal to a machine in the environment, the plurality of sensors communicatively coupled to the data collection circuit; and a machine learning data analysis circuit structured to receive the output data and learn received output data patterns predictive of at least one of an outcome and a state, wherein the monitoring system is structured to determine if the output data matches a learned received output data pattern. In embodiments, the machine learning data analysis circuit may be structured to learn received output data patterns by being seeded with a model, such as where the model is a physical model, an operational model, or a system model. The machine learning data analysis circuit may be structured to learn received output data patterns based on the outcome or the state. The monitoring system may keep or modify operational parameters or equipment based on the predicted outcome or the state. The data collection circuit collects data points from one or more of the plurality of sensors based on the learned received output data patterns, the outcome, or the state. The data collection circuit may change a data storage technique for the output data based on the learned received output data patterns, the outcome, or the state. The data collection circuit may change a data presentation mode or manner based on the learned received output data patterns, the outcome, or the state. The data collection circuit may apply one or more filters (low pass, high pass, band pass, etc.) to the output data. The data collection circuit may adjust the weights/biases of the machine learning data analysis circuit, such as where the adjustment is in response to the learned received output data patterns. The monitoring system may remove, or re-task under-utilized equipment based on one or more of the learned received output data patterns, the outcome, or the state. The machine learning data analysis circuit may include a neural network expert system. The machine learning data analysis circuit may be structured to learn received output data patterns indicative of progress/alignment with one or more goals or guidelines, such as where progress or alignment of each goal or guideline is determined by a different subset of the plurality of sensors. The machine learning data analysis circuit may be structured to learn received output data patterns indicative of an unknown variable. The machine learning data analysis circuit may be structured to learn received output data patterns indicative of a preferred input sensor among available input sensors. The machine learning data analysis circuit may be disposed in part on a machine, on one or more data collectors, in network infrastructure, in the cloud, or any combination thereof. The output data from the vibration sensors may form a vibration fingerprint, such as where the vibration fingerprint includes one or more of a frequency, a spectrum, a velocity, a peak location, a wave peak shape, a waveform shape, a wave envelope shape, an acceleration, a phase information, and a phase shift. The data collection circuit may apply a rule regarding how many parameters of the vibration fingerprint to match or the standard deviation for the match in order to identify a match between the output data and the learned received output data pattern. The state may be one of a normal operation, a maintenance required, a failure, or an imminent failure. The monitoring system may trigger an alert based on the predicted outcome or state. The monitoring system may shut down equipment, component, or line based on the predicted outcome or state. The monitoring system may initiate maintenance, lubrication, or alignment based on the predicted outcome or state. The monitoring system may deploy a field technician based on the predicted outcome or state. The monitoring system may recommend a vibration absorption or dampening device based on the predicted outcome or state. The monitoring system may modify a process to utilize backup equipment or a component based on the predicted outcome or state. The monitoring system may modify a process to preserve products or reactants based on the predicted outcome or state. The monitoring system may generate or modify a maintenance schedule based on the predicted outcome or state. The system may be distributed between the data collector and a remote infrastructure.

In embodiments, a monitoring system for data collection in an industrial environment may comprise: a data collection circuit structured to collect output data from a plurality of sensors selected among vibration sensors, ambient environment condition sensors and local sensors for collecting non-vibration data proximal to a machine in the environment, the plurality of sensors communicatively coupled to the data collection circuit; and a machine learning data analysis circuit structured to receive the output data and learn received output data patterns predictive of at least one of an outcome and a state, wherein the monitoring system is structured to determine if the output data matches a learned received output data pattern and keep or modify operational parameters or equipment based on the determination.

In embodiments, a monitoring system for data collection in an industrial environment may comprise: a data collection circuit structured to collect output data from a plurality of sensors selected among vibration sensors, ambient environment condition sensors and local sensors for collecting non-vibration data proximal to a machine in the environment, the plurality of sensors communicatively coupled to the data collection circuit; and a machine learning data analysis circuit structured to receive the output data and learn received output data patterns predictive of at least one of an outcome and a state, wherein the output data from the vibration sensors forms a vibration fingerprint. In embodiments, the vibration fingerprint may comprise one or more of a frequency, a spectrum, a velocity, a peak location, a wave peak shape, a waveform shape, a wave envelope shape, an acceleration, a phase information, and a phase shift. The data collection circuit may apply a rule regarding how many parameters of the vibration fingerprint to match or the standard deviation for the match in order to identify a match between the output data and the learned received output data pattern. The monitoring system may be structured to determine if the output data matches a learned received output data pattern and keep or modify operational parameters or equipment based on the determination.

In embodiments, a monitoring system for data collection in an industrial environment may comprise: a data collection band circuit that identifies a subset of a plurality of sensors from which to process output data, the sensors selected among vibration sensors, ambient environment condition sensors and local sensors for collecting non-vibration data proximal to a machine in the environment, the plurality of sensors communicatively coupled to the data collection band circuit; a data collection circuit structured to collect the output data from the subset of plurality of sensors; and a machine learning data analysis circuit structured to receive the output data and learn received output data patterns predictive of at least one of an outcome and a state wherein when the learned received output data patterns do not reliably predict the outcome or the state, the data collection band circuit alters at least one parameter of at least one of the plurality of sensors. In embodiments, the controller may identify a new data collection band circuit based on one or more of the learned received output data patterns and the outcome or state. The machine learning data analysis circuit may be further structured to learn received output data patterns indicative of a preferred input data collection band among available input data collection bands. The system may be distributed between the data collection circuit and a remote infrastructure.

In embodiments, a monitoring system for data collection in an industrial environment may comprise a data collection circuit structured to collect output data from the plurality of sensors, the sensors selected among vibration sensors, ambient environment condition sensors and local sensors for collecting non-vibration data proximal to a machine in the environment and being communicatively coupled to the data collection circuit, wherein the output data from the vibration sensors is in the form of a vibration fingerprint; a data structure comprising a plurality of vibration fingerprints and associated outcomes; and a machine learning data analysis circuit structured to receive the output data and learn received output data patterns predictive of an outcome or a state based on processing of the vibration fingerprints. The machine learning data analysis circuit may be seeded with one of the plurality of vibration fingerprints from the data structure. The data structure maybe updated if a changed parameter resulted in a new vibration fingerprint or if a predicted outcome did not occur in the absence of mitigation. The data structure may be updated when the learned received output data patterns do not reliably predict the outcome or the state. The system may be distributed between the data collection circuit and a remote infrastructure.

In embodiments, a monitoring system for data collection in an industrial environment may comprise a data collection circuit structured to collect output data from the plurality of sensors selected among vibration sensors, ambient environment condition sensors and local sensors for collecting non-vibration data proximal to a machine in the environment, the plurality of sensors communicatively coupled to the data collection circuit, wherein the output data from the plurality of sensors is in the form of a noise pattern; a data structure comprising a plurality of noise patterns and associated outcomes; and a machine learning data analysis circuit structured to receive the output data and learn received output data patterns predictive of an outcome or a state based on processing of the noise patterns.

An example system for data collection in an industrial environment includes an industrial system having a number of components, and a number of sensors wherein each of the sensors is operatively coupled to at least one of the components. The example system further includes a sensor communication circuit that interprets a number of sensor data values in response to a sensed parameter group, a pattern recognition circuit that determines a recognized pattern value in response to a least a portion of the sensor data values, and a sensor learning circuit that updates the sensed parameter group in response to the recognized pattern value. The example sensor communication circuit further adjusts the interpreting the sensor data values in response to the updated sensed parameter group.

Certain further aspects of an example system are described following, any one or more of which may be present in certain embodiments. An example system includes the sensed parameter group being a fused number of sensors, and where the recognized pattern value further includes a secondary value including a value determined in response to the fused number of sensors. An example system further includes the pattern recognition circuit and the sensor learning circuit iteratively performing the determining the recognized pattern value and the updating the sensed parameter group to improve a sensing performance value. An example system further includes the sensing performance value include a determination of one or more of the following: a signal-to-noise performance for detecting a value of interest in the industrial system; a network utilization of the sensors in the industrial system; an effective sensing resolution for a value of interest in the industrial system; a power consumption value for a sensing system in the industrial system, the sensing system including the sensors; a calculation efficiency for determining the secondary value; an accuracy and/or a precision of the secondary value; a redundancy capacity for determining the secondary value; and/or a lead time value for determining the secondary value. Example and non-limiting calculation efficiency values include one or more determinations such as: processor operations to determine the secondary value; memory utilization for determining the secondary value; a number of sensor inputs from the number of sensors for determining the secondary value; and/or supporting data long-term storage for supporting the secondary value.

An example system includes one or more, or all, of the sensors as analog sensors and/or as remote sensors. An example system includes the secondary value being a value such as: a virtual sensor output value; a process prediction value; a process state value; a component prediction value; a component state value; and/or a model output value having the sensor data values from the fused number of sensors as an input. An example system includes the fused number of sensors being one or more of the combinations of sensors such as: a vibration sensor and a temperature sensor; a vibration sensor and a pressure sensor; a vibration sensor and an electric field sensor; a vibration sensor and a heat flux sensor; a vibration sensor and a galvanic sensor; and/or a vibration sensor and a magnetic sensor.

An example sensor learning circuit further updates the sensed parameter group by performing an operation such as: updating a sensor selection of the sensed parameter group; updating a sensor sampling rate of at least one sensor from the sensed parameter group; updating a sensor resolution of at least one sensor from the sensed parameter group; updating a storage value corresponding to at least one sensor from the sensed parameter group; updating a priority corresponding to at least one sensor from the sensed parameter group; and/or updating at least one of a sampling rate, sampling order, sampling phase, and/or a network path configuration corresponding to at least one sensor from the sensed parameter group. An example pattern recognition circuit further determines the recognized pattern value by performing an operation such as: determining a signal effectiveness of at least one sensor of the sensed parameter group and the updated sensed parameter group relative to a value of interest; determining a sensitivity of at least one sensor of the sensed parameter group and the updated sensed parameter group relative to the value of interest; determining a predictive confidence of at least one sensor of the sensed parameter group and the updated sensed parameter group relative to the value of interest; determining a predictive delay time of at least one sensor of the sensed parameter group and the updated sensed parameter group relative to the value of interest; determining a predictive accuracy of at least one sensor of the sensed parameter group and the updated sensed parameter group relative to the value of interest; determining a predictive precision of at least one sensor of the sensed parameter group and the updated sensed parameter group relative to the value of interest; and/or updating the recognized pattern value in response to external feedback. Example and non-limiting values of interest include: a virtual sensor output value; a process prediction value; a process state value; a component prediction value; a component state value; and/or a model output value having the sensor data values from the fused plurality of sensors as an input.

An example pattern recognition circuit further accesses cloud-based data including a second number of sensor data values, the second number of sensor data values corresponding to at least one offset industrial system. An example sensor learning circuit further accesses the cloud-based data including a second updated sensor parameter group corresponding to the at least one offset industrial system.

An example procedure for data collection in an industrial environment includes an operation to provide a number of sensors to an industrial system including a number of components, each of the number of sensors operatively coupled to at least one of the number of components, an operation to interpret a number of sensor data values in response to a sensed parameter group, the sensed parameter group including a fused number of sensors from the number of sensors, an operation to determine a recognized pattern value including a secondary value determined in response to the number of sensor data values, an operation to update the sensed parameter group in response to the recognized pattern value, and an operation to adjust the interpreting the number of sensor data values in response to the updated sensed parameter group.

Certain further aspects of an example procedure are described following, any one or more of which may be included in certain embodiments. An example procedure includes an operation to iteratively perform the determining the recognized pattern value and the updating the sensed parameter group to improve a sensing performance value, where determining the sensing performance value includes an least one operation for determining a value, such as determining: a signal-to-noise performance for detecting a value of interest in the industrial system; a network utilization of the plurality of sensors in the industrial system; an effective sensing resolution for a value of interest in the industrial system; a power consumption value for a sensing system in the industrial system, the sensing system including the plurality of sensors; a calculation efficiency for determining the secondary value; an accuracy and/or a precision of the secondary value; a redundancy capacity for determining the secondary value; and/or a lead time value for determining the secondary value.

An example procedure includes an operation to update the sensed parameter group comprised by performing at least one operation such as: updating a sensor selection of the sensed parameter group; updating a sensor sampling rate of at least one sensor from the sensed parameter group; updating a sensor resolution of at least one sensor from the sensed parameter group; updating a storage value corresponding to at least one sensor from the sensed parameter group; updating a priority corresponding to at least one sensor from the sensed parameter group; and/or updating at least one of a sampling rate, sampling order, sampling phase, and a network path configuration corresponding to at least one sensor from the sensed parameter group. An example procedure includes determining the recognized pattern value by performing at least one operation such as: determining a signal effectiveness of at least one sensor of the sensed parameter group and the updated sensed parameter group relative to a value of interest; determining a sensitivity of at least one sensor of the sensed parameter group and the updated sensed parameter group relative to the value of interest; determining a predictive confidence of at least one sensor of the sensed parameter group and the updated sensed parameter group relative to the value of interest; determining a predictive delay time of at least one sensor of the sensed parameter group and the updated sensed parameter group relative to the value of interest; determining a predictive accuracy of at least one sensor of the sensed parameter group and the updated sensed parameter group relative to the value of interest; determining a predictive precision of at least one sensor of the sensed parameter group and the updated sensed parameter group relative to the value of interest; and/or updating the recognized pattern value in response to external feedback.

The term industrial system (and similar terms) as utilized herein should be understood broadly. Without limitation to any other aspect or description of the present disclosure, an industrial system includes any large scale process system, mechanical system, chemical system, assembly line, oil and gas system (including, without limitation, production, transportation, exploration, remote operations, offshore operations, and/or refining), mining system (including, without limitation, production, exploration, transportation, remote operations, and/or underground operations), rail system (yards, trains, shipments, etc.), construction, power generation, aerospace, agriculture, food processing, and/or energy generation. Certain components may not be considered industrial individually, but may be considered industrially in an aggregated system - for example a single fan, motor, and/or engine may be not an industrial system, but may be a part of a larger system and/or be accumulated with a number of other similar components to be considered an industrial system and/or a part of an industrial system. In certain embodiments, a system may be considered an industrial system for some purposes but not for other purposes - for example a large data server farm may be considered an industrial system for certain sensing operations, such as temperature detection, vibration, or the like, but not an industrial system for other sensing operations such as gas composition. Additionally, in certain embodiments, otherwise similar looking systems may be differentiated in determining whether such system are industrial systems, and/or which type of industrial system. For example, one data server farm may not, at a given time, have process stream flow rates that are critical to operation, while another data server farm may have process stream flow rates that are critical to operation (e.g., a coolant flow stream), and accordingly one data farm server may be an industrial system for a data collection and/or sensing improvement process or system, while the other is not. Accordingly, the benefits of the present disclosure may be applied in a wide variety of systems, and any such systems may be considered an industrial system herein, while in certain embodiments a given system may not be considered an industrial system herein. One of skill in the art, having the benefit of the disclosure herein and knowledge about a contemplated system ordinarily available to that person, can readily determine which aspects of the present disclosure will benefit a particular system, how to combine processes and systems from the present disclosure to enhance operations of the contemplated system. Certain considerations for the person of skill in the art, in determining whether a contemplated system is an industrial system and/or whether aspects of the present disclosure can benefit or enhance the contemplated system include, without limitation: the accessibility of portions of the system to positioning sensing devices; the sensitivity of the system to capital costs (e.g., initial installation) and operating costs (e.g., optimization of processes, reduction of power usage); the transmission environment of the system (e.g., availability of broadband internet; satellite coverage; wireless cellular access; the electromagnetic ("EM") environment of the system; the weather, temperature, and environmental conditions of the system; the availability of suitable locations to run wires, network lines, and the like; the presence and/or availability of suitable locations for network infrastructure, router positioning, and/or wireless repeaters); the availability of trained personnel to interact with computing devices; the desired spatial, time, and/or frequency resolution of sensed parameters in the system; the degree to which a system or process is well understood or modeled; the turndown ratio in system operations (e.g., high load differential to low load; high flow differential to low flow; high temperature operation differential to low temperature operation); the turndown ratio in operating costs (e.g., effects of personnel costs based on time (day, season, etc.); effects of power consumption cost variance with time, throughput, etc.); the sensitivity of the system to failure, down-time, or the like; the remoteness of the contemplated system (e.g., transport costs, time delays, etc.); and/or qualitative scope of change in the system over the operating cycle (e.g., the system runs several distinct processes requiring a variable sensing environment with time; time cycle and nature of changes such as periodic, event driven, lead times generally available, etc.). While specific examples of industrial systems and considerations are described herein for purposes of illustration, any system benefitting from the disclosures herein, and any considerations understood to one of skill in the art having the benefit of the disclosures herein, are specifically contemplated within the scope of the present disclosure.

The term sensor (and similar terms) as utilized herein should be understood broadly. Without limitation to any other aspect or description of the present disclosure, sensor includes any device configured to provide a sensed value representative of a physical value (e.g., temperature, force, pressure) in a system, or representative of a conceptual value in a system at least having an ancillary relationship to a physical value (e.g., work, state of charge, frequency, phase, etc.).

Example and non-limiting sensors include vibration, acceleration, noise, pressure, force, position, location, velocity, displacement, temperature, heat flux, speed, rotational speed (e.g., a tachometer), motion, accelerometers, magnetic field, electrical field, galvanic, current, flow (gas, fluid, heat, particulates, particles, etc.), level, proximity, gas composition, fluid composition, toxicity, corrosiveness, acidity, pH, humidity, hygrometer measures, moisture, density (bulk or specific), ultrasound, imaging, analog, and/or digital sensors. The list of sensed values is a non-limiting example, and the benefits of the present disclosure in many applications can be realized independent of the sensor type, while in other applications the benefits of the present disclosure may be dependent upon the sensor type.

The sensor type and mechanism for detection may be any type of sensor understood in the art. Without limitation, an accelerometer may be any type and scaling, for example 500 mV per g (1 g = 9.8 m/s$^2$), 100 mV, 1 V per g, 5 V per g, 10 V per g, 10 MV per g, as well as any frequency capability. It will be understood for accelerometers, and for all sensor types, that the scaling and range may be competing (e.g., in a fixed-bit or low bit A/D system), and/or selection of high resolution scaling with a large range may drive up sensor and/or computing costs, which may be acceptable in certain embodiments, and may be prohibitive in other embodiments. Example and non-limiting accelerometers include piezo-electric devices, high resolution and sampling speed position detection devices (e.g., laser based devices), and/or detection of other parameters (strain, force, noise, etc.) that can be correlated to acceleration and/or vibration. Example and non-limiting proximity probes include electromagnetic devices (e.g., Hall effect, Variable Reluctance, etc.), a sleeve/oil film device, and/or determination of other parameters than can be correlated to proximity. An example vibration sensor includes a tri-axial probe, which may have high frequency response (e.g., scaling of 100 MV/g). Example and non-limiting temperature sensors include thermistors, thermocouples, and/or optical temperature determination.

A sensor may, additionally or alternatively, provide a processed value (e.g., a de-bounced, filtered, and/or compensated value) and/or a raw value, with processing downstream (e.g., in a data collector, controller, plant computer, and/or on a cloud-based data receiver). In certain embodiments, a sensor provides a voltage, current, data file (e.g., for images), or other raw data output, and/or a sensor provides a value representative of the intended sensed measurement (e.g., a temperature sensor may communicate a voltage or a temperature value). Additionally or alternatively, a sensor may communicate wirelessly, through a wired connection, through an optical connection, or by any other mechanism. The described examples of sensor types and/or communication parameters are non-limiting examples for purposes of illustration.

Additionally or alternatively, in certain embodiments, a sensor is a distributed physical device - for example where two separate sensing elements coordinate to provide a sensed value (e.g., a position sensing element and a mass sensing element may coordinate to provide an acceleration value). In certain embodiments, a single physical device may form two or more sensors, and/or parts of more than one sensor. For example, a position sensing element may form a position sensor and a velocity sensor, where the same physical hardware provides the sensed data for both determinations.

The term smart sensor, smart device (and similar terms) as utilized herein should be understood broadly. Without limitation to any other aspect or description of the present disclosure, a smart sensor includes any sensor and aspect thereof as described throughout the present disclosure. A smart sensor includes an increment of processing reflected in the sensed value communicated by the sensor, including at least basic sensor processing (e.g., de-bouncing, filtering, compensation, normalization, and/or output limiting), more complex compensations (e.g., correcting a temperature value based on known effects of current environmental conditions on the sensed temperature value, common mode or other noise removal, etc.), a sensing device that provides the sensed value as a network communication, and/or a sensing device that aggregates a number of sensed values for communication (e.g., multiple sensors on a device communicated out in a parseable or deconvolutable manner or as separate messages; multiple sensors providing a value to a single smart sensor, which relays sensed values on to a data collector, controller, plant computer, and/or cloud-based data receiver). The use of the term smart sensor is for purposes of illustration, and whether a sensor is a smart sensor can depend upon the context and the contemplated system, and can be a relative description compared to other sensors in the contemplated system. Thus, a given sensor having identical functionality may be a smart sensor for the purposes of one contemplated system, and just a sensor for the purposes of another contemplated system, and/or may be a smart sensor in a contemplated system during certain operating conditions, and just a sensor for the purposes of the same contemplated system during other operating conditions.

The terms sensor fusion, fused sensors, and similar terms, as utilized herein, should be understood broadly, except where context indicates otherwise, without limitation to any other aspect or description of the present disclosure. A sensor fusion includes a determination of second order data from sensor data, and further includes a determination of second order data from sensor data of multiple sensors, including involving multiplexing of streams of data, combinations of batches of data, and the like from the multiple sensors. Second order data includes a determination about a system or operating condition beyond that which is sensed directly. For example, temperature, pressure, mixing rate, and other data may be analyzed to determine which parameters are result-effective on a desired outcome (e.g., a reaction rate). The sensor fusion may include sensor data from multiple sources, and/or longitudinal data (e.g., taken over a period of time, over the course of a process, and/or over an extent of components in a plant - for example tracking a number of assembled parts, a virtual slug of fluid passing through a pipeline, or the like). The sensor fusion may be performed in real-time (e.g., populating a number of sensor fusion determinations with sensor data as a process progresses), off-line (e.g., performed on a controller, plant computer, and/or cloud-based computing device), and/or as a post-processing operation (e.g., utilizing historical data, data from multiple plants or processes, etc.). In certain embodiments, a sensor fusion includes a machine pattern recognition operation - for example where an outcome of a process is given to the machine and/or determined by the machine, and the machine pattern recognition operation determines result-effective parameters from the detected sensor value space to determine which operating conditions were likely to be the cause of the outcome and/or the off-nominal result of the outcome (e.g., process was less effective or more effective than nominal, failed, etc.). In certain embodiments, the outcome may be a quantitative outcome (e.g., 20% more product was produced than a nominal run) or a qualitative outcome (e.g., product quality was unacceptable, component X of the contemplated system failed during the process, component X of the contemplated system required a maintenance or service event, etc.).

In certain embodiments, a sensor fusion operation is iterative or recursive - for example an estimated set of result effective parameters is updated after the sensor fusion operation, and a subsequent sensor fusion operation is performed on the same data or another data set with an updated set of the result effective parameters. In certain embodiments, subsequent sensor fusion operations include adjustments to the sensing scheme - for example higher resolution detections (e.g., in time, space, and/or frequency domains), larger data sets (and consequent commitment of computing and/or networking resources), changes in sensor capability and/or settings (e.g., changing an A/D scaling, range, resolution, etc.; changing to a more capable sensor and/or more capable data collector, etc.) are performed for subsequent sensor fusion operations. In certain embodiments, the sensor fusion operation demonstrates improvements to the contemplated system (e.g., production quantity, quality, and/or purity, etc.) such that expenditure of additional resources to improve the sensing scheme are justified. In certain embodiments, the sensor fusion operation provides for improvement in the sensing scheme without incremental cost - for example by narrowing the number of result effective parameters and thereby freeing up system resources to provide greater resolution, sampling rates, etc., from hardware already present in the contemplated system. In certain embodiments, iterative and/or recursive sensor fusion is performed on the same data set, a subsequent data set, and/or a historical data set. For example, high resolution data may already be present in the system, and a first sensor fusion operation is performed with low resolution data (e.g., sampled from the high resolution data set), such as to allow for completion of sensor fusion processing operations within a desired time frame, within a desired processor, memory, and/or network utilization, and/or to allow for checking a large number of variables as potential result effective parameters. In a further example, a greater number of samples from the high resolution data set may be utilized in a subsequent sensor fusion operation in response to confidence that improvements are present, narrowing of the potential result effective variables, and/or a determination that higher resolution data is required to determine the result effective parameters and/or effective values for such parameters.

The described operations and aspects for sensor fusion are non-limiting examples, and one of skill in the art, having the benefit of the disclosures herein and information ordinarily available about a contemplated system, can readily design a system to utilize and/or benefit from a sensor fusion operation. Certain considerations for a system to utilize and/or benefit from a sensor fusion operation include, without limitation: the number of components in the system; the cost of components in the system; the cost of maintenance and/or down-time for the system; the value of improvements in the system (production quantity, quality, yield, etc.); the presence, possibility, and/or consequences of undesirable system outcomes (e.g., side products, thermal and/or luminary events, environmental benefits or consequences, hazards present in the system); the expense of providing a multiplicity of sensors for the system; the complexity between system inputs and system outputs; the availability and cost of computing resources (e.g., processing, memory, and/or communication throughput); the size/scale of the contemplated system and/or the ability of such a system to generate statistically significant data; whether offset systems exist, including whether data from offset systems is available and whether combining data from offset systems will generate a statistically improved data set relative to the system considered alone; and/or the cost of upgrading, improving, or changing a sensing scheme for the contemplated system. The described considerations for a contemplated system that may benefit from or utilize a sensor fusion operation are non-limiting illustrations.

Certain systems, processes, operations, and/or components are described in the present disclosure as "offset systems" or the like. An offset system is a system distinct from a contemplated system, but having relevance to the contemplated system. For example, a contemplated refinery may have an "offset refinery," which may be a refinery operated by a competitor, by a same entity operating the contemplated refinery, and/or a historically operated refinery that no longer exists. The offset refinery bears some relevant relationship to the contemplated refinery, such as utilizing similar reactions, process flows, production volumes, feed stock, effluent materials, or the like. A system which is an offset system for one purpose may not be an offset system for another purpose. For example, a manufacturing process utilizing conveyor belts and similar motors may be an offset process for a contemplated manufacturing process for the purpose of tracking product movement, understanding motor operations and failure modes, or the like, but may not be an offset process for product quality if the products being produced have distinct quality outcome parameters. Any industrial system contemplated herein may have an offset system for certain purposes. One of skill in the art, having the benefit of the present disclosure and information ordinarily available for a contemplated system, can readily determine what is disclosed by an offset system or offset aspect of a system.

Any one or more of the terms computer, computing device, processor, circuit, and/or server include a computer of any type, capable to access instructions stored in communication thereto such as upon a non-transient computer readable medium, whereupon the computer performs operations of systems or methods described herein upon executing the instructions. In certain embodiments, such instructions themselves comprise a computer, computing device, processor, circuit, and/or server. Additionally or alternatively, a computer, computing device, processor, circuit, and/or server may be a separate hardware device, one or more computing resources distributed across hardware devices, and/or may include such aspects as logical circuits, embedded circuits, sensors, actuators, input and/or output devices, network and/or communication resources, memory resources of any type, processing resources of any type, and/or hardware devices configured to be responsive to determined conditions to functionally execute one or more operations of systems and methods herein.

Certain operations described herein include interpreting, receiving, and/or determining one or more values, parameters, inputs, data, or other information. Operations including interpreting, receiving, and/or determining any value parameter, input, data, and/or other information include, without limitation: receiving data via a user input; receiving data over a network of any type; reading a data value from a memory location in communication with the receiving device; utilizing a default value as a received data value; estimating, calculating, or deriving a data value based on other information available to the receiving device; and/or updating any of these in response to a later received data value. In certain embodiments, a data value may be received by a first operation, and later updated by a second operation, as part of the receiving a data value. For example, when communications are down, intermittent, or interrupted, a first operation to interpret, receive, and/or determine a data value may be performed, and when communications are restored an updated operation to interpret, receive, and/or determine the data value may be performed.

Certain logical groupings of operations herein, for example methods or procedures of the current disclosure, are provided to illustrate aspects of the present disclosure. Operations described herein are schematically described and/or depicted, and operations may be combined, divided, re-ordered, added, or removed in a manner consistent with the disclosure herein. It is understood that the context of an operational description may require an ordering for one or more operations, and/or an order for one or more operations may be explicitly disclosed, but the order of operations should be understood broadly, where any equivalent grouping of operations to provide an equivalent outcome of operations is specifically contemplated herein. For example, if a value is used in one operational step, the determining of the value may be required before that operational step in certain contexts (e.g., where the time delay of data for an operation to achieve a certain effect is important), but may not be required before that operation step in other contexts (e.g., where usage of the value from a previous execution cycle of the operations would be sufficient for those purposes). Accordingly, in certain embodiments an order of operations and grouping of operations as described is explicitly contemplated herein, and in certain embodiments re-ordering, subdivision, and/or different grouping of operations is explicitly contemplated herein.

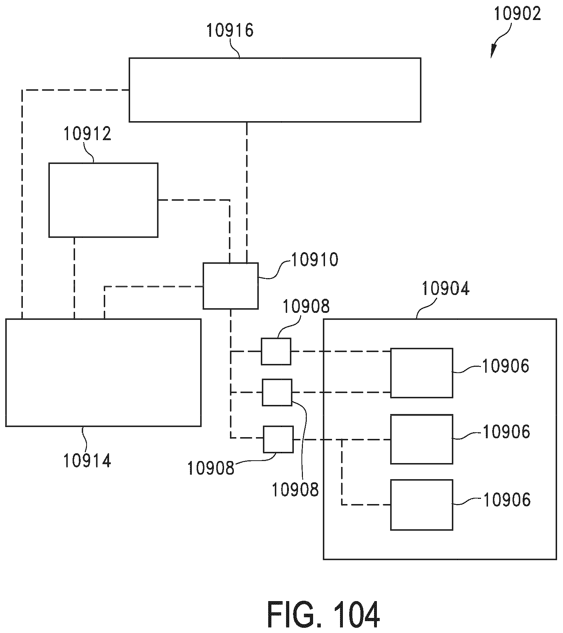

Referencing Figure 104, an example system 10902 for data collection in an industrial environment includes an industrial system 10904 having a number of components 10906, and a number of sensors 10908, wherein each of the sensors 10908 is operatively coupled to at least one of the components 10906. The selection, distribution, type, and communicative setup of sensors depends upon the application of the system 10902 and/or the context.

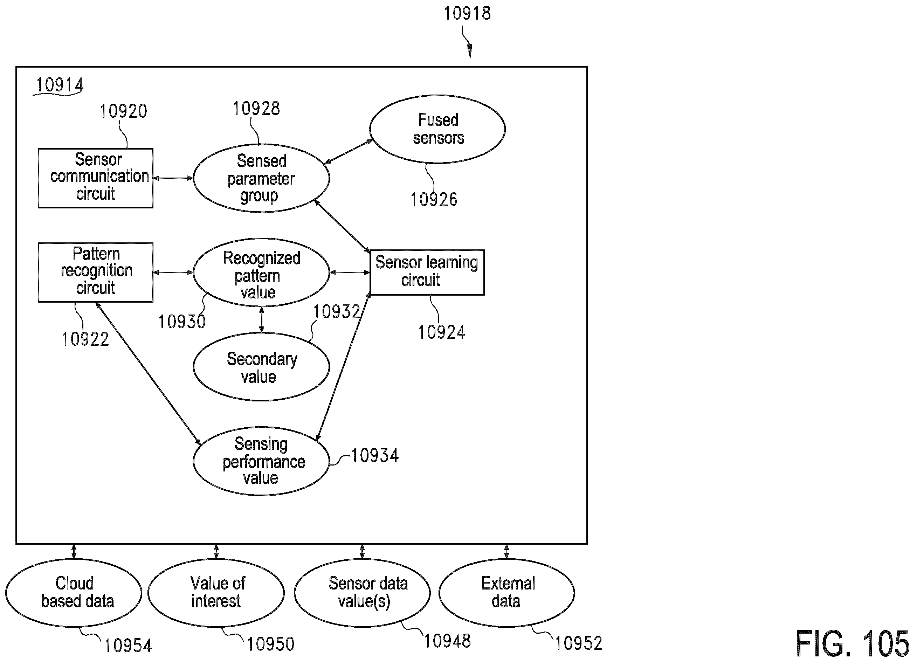

The example system 10902 further includes a sensor communication circuit 10920 (reference Figure 105) that interprets a number of sensor data values 10948 in response to a sensed parameter group 10928. The sensed parameter group 10928 includes a description of which sensors 10908 are sampled at which times, including at least the selected sampling frequency, a process stage wherein a particular sensor may be providing a value of interest, and the like. An example system includes the sensed parameter group 10928 being a fused number of sensors 10926, for example a set of sensors believed to encompass detection of operating conditions of the system that affect a desired output, such as production output, quality, efficiency, profitability, purity, maintenance or service predictions of components in the system, failure mode predictions, and the like. In a further embodiment, the recognized pattern value 10930 further includes a secondary value 10932 including a value determined in response to the fused number of sensors 10926.

In certain embodiments, sensor data values 10948 are provided to a data collector 10910, which may be in communication with multiple sensors 10908 and/or with a controller 10914. In certain embodiments, a plant computer 10912 is additionally or alternatively present. In the example system, the controller 10914 is structured to functionally execute operations of the sensor communication circuit 10920, pattern recognition circuit 10922, and/or the sensor learning circuit 10924, and is depicted as a separate device for clarity of description. Aspects of the controller 10914 may be present on the sensors 10908, the data controller 10910, the plant computer 10912, and/or on a cloud computing device 10916. In certain embodiments, all aspects of the controller 10914 may be present in another device depicted on the system 10902. The plant computer 10912 represents local computing resources, for example processing, memory, and/or network resources, that may be present and/or in communication with the industrial system 10904. In certain embodiments, the cloud computing device 10916 represents computing resources externally available to the industrial system 10904, for example over a private network, intra-net, through cellular communications, satellite communications, and/or over the internet. In certain embodiments, the data controller 10910 may be a computing device, a smart sensor, a MUX box, or other data collection device capable to receive data from multiple sensors and to pass-through the data and/or store data for later transmission. An example data controller 10910 has no storage and/or limited storage, and selectively passes sensor data therethrough, with a subset of the sensor data being communicated at a given time due to bandwidth considerations of the data controller 10910, a related network, and/or imposed by environmental constraints. In certain embodiments, one or more sensors and/or computing devices in the system 10902 are portable devices - for example a plant operator walking through the industrial system may have a smart phone, which the system 10902 may selectively utilize as a data controller 10910, sensor 10908 - for example to enhance communication throughput, sensor resolution, and/or as a primary method for communicating sensor data values 10948 to the controller 10914.

The example system 10902 further includes a pattern recognition circuit 10922 that determines a recognized pattern value 10930 in response to a least a portion of the sensor data values 10948.

The example system 10902 further includes a sensor learning circuit 10924 that updates the sensed parameter group 10928 in response to the recognized pattern value 10930. The example sensor communication circuit 10920 further adjusts the interpreting the sensor data values 10948 in response to the updated sensed parameter group 10928.

An example system 10902 further includes the pattern recognition circuit 10922 and the sensor learning circuit 10924 iteratively performing the determining the recognized pattern value 10930 and the updating the sensed parameter group 10928 to improve a sensing performance value 10934. For example, the pattern recognition circuit 10922 may add sensors, remove sensors, and/or change sensor setting to modify the sensed parameter group 10928 based upon sensors which appear to be effective or ineffective predictors of the recognized pattern value 10930, and the sensor learning circuit 10924 may instruct a continued change (e.g., while improvement is still occurring), an increased or decreased rate of change (e.g., to converge more quickly on an improved sensed parameter group 10928), and/or instruct a randomized change to the sensed parameter group 10928 (e.g., to ensure that all potentially result effective sensors are being checked, and/or to avoid converging into a local optimal value).

Example and non-limiting options for the sensing performance value 10934 include: a signal-to-noise performance for detecting a value of interest in the industrial system (e.g., a determination that the prediction signal for the value is high relative to noise factors for one or more sensors of the sensed parameter group 10928, and/or for the sensed parameter group 10928 as a whole); a network utilization of the sensors in the industrial system (e.g., the sensor learning circuit 10924 may score a sensed parameter group 10928 relatively high where it is as effective or almost as effective as another sensed parameter group 10928, but results in lower network utilization); an effective sensing resolution for a value of interest in the industrial system (e.g., the sensor learning circuit 10924 may score a sensed parameter group 10928 relatively high where it provides a responsive prediction of the output value to smaller changes in input values); a power consumption value for a sensing system in the industrial system, the sensing system including the sensors (e.g., the sensor learning circuit 10924 may score a sensed parameter group 10928 relatively high where it is as effective or almost as effective as another sensed parameter group 10928, but results in lower power consumption) ; a calculation efficiency for determining the secondary value (e.g., the sensor learning circuit 10924 may score a sensed parameter group 10928 relatively high where it is as effective or almost as effective as another sensed parameter group 10928 in determining the secondary value 10932, but results in fewer processor cycles, lower network utilization, and/or lower memory utilization including stored memory requirements as well as intermediate memory utilization such as buffers); an accuracy and/or a precision of the secondary value (e.g., the sensor learning circuit 10924 may score a sensed parameter group 10928 relatively high where it provides a highly accurate and/or highly precise determination of the secondary value 10932); a redundancy capacity for determining the secondary value (e.g., the sensor learning circuit 10924 may score a sensed parameter group 10928 relatively high where it provides similar capability and/or resource utilization, but provides for additional sensing redundancy, such as being more robust to gaps in data from one or more of the sensors in the sensed parameter group 10928); and/or a lead time value for determining the secondary value 10932 (e.g., the sensor learning circuit 10924 may score a sensed parameter group 10928 relatively high where it provides an improved or sufficient lead time in the secondary value 10932 determination - for example to assist in avoiding over-temperature operation, spoiling an entire production run, determining whether a component has sufficient service life to complete a production run, etc.) Example and non-limiting calculation efficiency values include one or more determinations such as: processor operations to determine the secondary value 10932; memory utilization for determining the secondary value 10932; a number of sensor inputs from the number of sensors for determining the secondary value 10932; and/or supporting memory, such as long-term storage or buffers for supporting the secondary value 10932.

Example systems include one or more, or all, of the sensors 10908 as analog sensors and/or as remote sensors. An example system includes the secondary value 10932 being a value such as: a virtual sensor output value; a process prediction value (e.g., a success value for a production run, an overtemperature value, an overpressure value, a product quality value, etc.); a process state value (e.g., a stage of the process, a temperature at a time and location in the process); a component prediction value (e.g., a component failure prediction, a component maintenance or service prediction, a component response to an operating change prediction); a component state value (a remaining service life or maintenance interval for a component); and/or a model output value having the sensor data values 10948 from the fused number of sensors 10926 as an input. An example system includes the fused number of sensors 10926 being one or more of the combinations of sensors such as: a vibration sensor and a temperature sensor; a vibration sensor and a pressure sensor; a vibration sensor and an electric field sensor; a vibration sensor and a heat flux sensor; a vibration sensor and a galvanic sensor; and/or a vibration sensor and a magnetic sensor.

An example sensor learning circuit 10924 further updates the sensed parameter group 10928 by performing an operation such as: updating a sensor selection of the sensed parameter group 10928 (e.g., which sensors are sampled); updating a sensor sampling rate of at least one sensor from the sensed parameter group (e.g., how fast the sensors provide information, and/or how fast information is passed through the network); updating a sensor resolution of at least one sensor from the sensed parameter group (e.g., changing or requesting a change in a sensor resolution, utilizing additional sensors to provide greater effective resolution); updating a storage value corresponding to at least one sensor from the sensed parameter group (e.g., storing data from the sensor at a higher or lower resolution, and/or over a longer or shorter time period); updating a priority corresponding to at least one sensor from the sensed parameter group (e.g., moving a sensor up to a higher priority - for example, if environmental conditions prevent data receipt from all planned sensors, and/or reducing a time lag between creation of the sensed data and receipt at the sensor learning circuit 10924); and/or updating at least one of a sampling rate, sampling order, sampling phase, and/or a network path configuration corresponding to at least one sensor from the sensed parameter group.

An example pattern recognition circuit 10922 further determines the recognized pattern value 10930 by performing an operation such as: determining a signal effectiveness of at least one sensor of the sensed parameter group and the updated sensed parameter group relative to a value of interest 10950 (e.g., determining that a sensor value is a good predictor of the value of interest 10950); determining a sensitivity of at least one sensor of the sensed parameter group 10928 and the updated sensed parameter group 10928 relative to the value of interest 10950 (e.g., determining the relative sensitivity of the determined value of interest to small changes in operating conditions based on the selected sensed parameter group 10928); determining a predictive confidence of at least one sensor of the sensed parameter group 10928 and the updated sensed parameter group 10928 relative to the value of interest 10950; determining a predictive delay time of at least one sensor of the sensed parameter group 10928 and the updated sensed parameter group 10928 relative to the value of interest 10950; determining a predictive accuracy of at least one sensor of the sensed parameter group 10928 and the updated sensed parameter group 10928 relative to the value of interest 10950; determining a classification precision of at least one sensor of the sensed parameter group 10928 (e.g., determining the accuracy of classification of a pattern by a machine classifier based on use of the at least one sensor); determining a predictive precision of at least one sensor of the sensed parameter group 10928 and the updated sensed parameter group 10928 relative to the value of interest 10950; and/or updating the recognized pattern value 10930 in response to external feedback, which may be received as external data 10952 (e.g., where an outcome is known, such as a maintenance event, product quality determination, production outcome determination, etc., the detection of the recognized pattern value 10930 is thereby improved according to the conditions of the system before the known outcome occurred). Example and non-limiting values of interest 10950 include: a virtual sensor output value; a process prediction value; a process state value; a component prediction value; a component state value; and/or a model output value having the sensor data values from the fused plurality of sensors as an input.

An example pattern recognition circuit 10922 further accesses cloud-based data 10954 including a second number of sensor data values, the second number of sensor data values corresponding to at least one offset industrial system. An example sensor learning circuit 10924 further accesses the cloud-based data 10954 including a second updated sensor parameter group corresponding to the at least one offset industrial system. Accordingly, the pattern recognition circuit 10922 can improve pattern recognition in the system based on increased statistical data available from an offset system. Additionally, or alternatively, the sensor learning circuit 10924 can improve more rapidly and with greater confidence based upon the data from the offset system - including determining which sensors in the offset system found to be effective in predicting system outcomes.

An example system includes an industrial system including an oil refinery. An example oil refinery includes one or more compressors for transferring fluids throughout the plant, and/or for pressurizing fluid streams (e.g., for reflux in a distillation column). Additionally, or alternatively, the example oil refinery includes vacuum distillation, for example, to fractionate hydrocarbons. The example oil refinery additionally includes various pipelines in the system for transferring fluids, bringing in feedstock, final product delivery, and the like. An example system includes a number of sensors configured to determine each aspect of a distillation column - for example temperatures of various fluid streams, temperatures, and compositions of individual contact trays in the column, measurements of the feed and reflux, as well as of the effluent or separated products. The design of a distillation column is complex, and optimal design can depend upon the sizing of boilers, compressors, the contact conditions within the column, as well as the composition of feedstock, all of which can vary significantly. Additionally, the optimal position for effective sensing of conditions in a pipeline can vary with fluid flow rates, environmental conditions (e.g., causing variation in heat transfer rates), the feedstock utilized, and other factors. Additionally, wear or loss of capability in a boiler, compressor, or other operating equipment can change the system response and capabilities, rendering a single point optimization - including where sensors should be positioned and how they should sample data - to be non-optimal as the system ages.

Provision of multiple sensors throughout the system can be costly, not necessarily because the sensors are expensive, but because the sensors provide data which may be prohibitive to transmit, store, and utilize. Cost may involve costs of transmitting over networks, as well as costs of operations, such as numbers of input/output operations (and time required to undertake such operations). The example system includes providing a large number of sensors throughout the system, and determining which of the sensors are effective for control and optimization of the distillation process. Additionally, as the feedstock and/or environmental conditions change, the optimal sensor package for both optimization and control may change. The example system utilizes a pattern recognition circuit to determine which sensors, including sensor fusion operations (including selection of groups, selection of multiplexing and combination, and the like), are effective in controlling the desired parameters of the distillation, and in determining the optimal values for temperatures, flow rates, entry trays for feed and reflux, and/or reflux rates. Additionally, the sensor learning circuit is capable, over time and/or utilizing offset oil refineries, to rapidly converge on various sensor packages that are appropriate for a multiplicity of operating conditions. If an unexpected operating condition occurs - for example an off-nominal operation of a compressor, the sensor learning circuit is capable of migrating the system to the correct sensing and operating conditions for the unexpected operating condition. The ability to flexibly utilize a multiplicity of sensors allows for the system to be flexible in response to changing conditions without providing for excessive capability in transmission and storage of sensor data. Accordingly, operations of the distillation column are improved and can be optimized for a large number of operating conditions. Additionally, alerts for the distillation column, based upon recognition of patterns indicating off-nominal operation, can be readily prepared to adjust or shut down the process before significant product quality loss and/or hazardous conditions develop. Example sensor fusion operations for a refinery include vibration information combined with temperatures, pressures, and/or composition (e.g., to determine compressor performance); temperature and pressure, temperature and composition, and/or composition and pressure (e.g., to determine feedstock variance, contact tray performance, and/or a component failure).

An example refinery system includes storage tanks and/or boiler feed water. Example system determinations include a sensor fusion to determine a storage tank failure and/or off-nominal operation, such as through a temperature and pressure fusion, and/or a vibration determination with a non-vibration determination (e.g., detecting leaks, air in the system, and/or a feed pump issue). Certain further example system determinations include a sensor fusion to determine a boiler feed water failure, such as through a sensor fusion including flow rate, pressure, temperature, and/or vibration. Any one or more of these parameters can be utilized to determine a system leak, failure, wear of a feed pump, scaling, and/or to reduce pumping losses while maintaining system flow rates. Similarly, an example industrial system includes a power generation system having a condensate and/or make-up water system, where a sensor fusion provides for a sensed parameter group and prediction of failures, maintenance, and the like.

An example industrial system includes an irrigation system for a field or a system of fields. Irrigations systems are subject to significant variability in the system (e.g., inlet pressures and/or water levels, component wear and maintenance) as well as environmental variability (e.g., types and distribution of crops planted, weather, soil moisture, humidity, seasonal variability in the sun, cloud coverage, and/or wind variance). Additionally, irrigation systems tend to be remotely located where high bandwidth network access, maintenance facilities, and/or even personnel for oversight are not readily available. An example system includes a multiplicity of sensors capable of detecting conditions for the irrigation system, without requiring that all of the sensors transmit or store data on a continuous basis. The pattern recognition circuit can readily determine the most important set of sensors to effectively predict patterns and those system conditions requiring a response (e.g., irrigation cycles, positioning, and the like). The sensor learning circuit provides for responsive migration of the sensed parameter group to variability, which may occur on slower (e.g., seasonal, climate change, etc.) or faster cycles (e.g., equipment failure, weather conditions, step change events such as planting or harvesting). Additionally, alerts for remote facilities can be readily prepared with confidence that the correct sensor package is in place for determining an off-nominal condition (e.g., imminent failure or maintenance requirement for a pump).

An example industrial system includes a chemical or pharmaceutical plant. Chemical plants require specific operating conditions, flow rates, temperatures, and the like to maintain proper temperatures, concentrations, mixing, and the like throughout the system. In many systems, there are numerous process steps, and an off-nominal or uncoordinated operation in one part of the process can result in reduced yields, a failed process, and/or a significant reduction in production capacity as coordinated processes must respond (or as coordinated processes fail to respond). Accordingly, a very large number of systems are required to minimally define the system, and in certain embodiments a prohibitive number of sensors are required, from a data transmission and storage viewpoint, to keep sensing capability for a broad range of operating conditions. Additionally, the complexity of the system results in difficulty optimizing and coordinating system operations even where sufficient sensors are present. In certain embodiments, the pattern recognition circuit can determine the sensing parameter groups that provide high resolution understanding of the system, without requiring that all of the sensors store and transmit data continuously. Further, the utilization of a sensor fusion provides for the opportunity to abstract desired outputs, for example "maximize yield" or "minimize an undesirable side reaction" without requiring a full understanding from the operator of which sensors and system conditions are most effective to achieve the abstracted desired output. Example components in a chemical or pharmaceutical plan amenable to control and predictions based on a sensor fusion operation include an agitator, a pressure reactor, a catalytic reactor, and/or a thermic heating system. Example sensor fusion operations to determine sensed parameter groups and tune the pattern recognition circuit include, without limitation, a vibration sensor combined with another sensor type, a composition sensor combined with another sensor type, a flow rate determination combined with another sensor type, and/or a temperature sensor combined with another sensor type. The sensor fusion best suited for a particular application can be converged upon by the sensor learning circuit, but also depends upon the type of component that is subject to predictions, as well as the type of desired outputs pursued by the operator. For example, agitators are amenable to vibration sensing, as well as uniformity of composition detection (e.g., high resolution temperature), expected reaction rates in a properly mixed system, and the like. Catalytic reactors are amenable to temperature sensing (based on the reaction thermodynamics), composition detection (e.g., for expected reactants, as well as direct detection of catalytic material), flow rates (e.g., gross mechanical failure, reduced volume of beads, etc.), and/or pressure detection (e.g., indicative of or coupled with flow rate changes).

An example industrial system includes a food processing system. Example food processing systems include pressurization vessels, stirrers, mixers, and/or thermic heating systems. Control of the process is critical to maintain food safety, product quality, and product consistency. However, most input parameters to the food processing system are subject to high variability - for example basic food products are inherently variable as natural products, with differing water content, protein content, and aesthetic variation. Additionally, labor cost management, power cost management, and variability in supply water, etc., provide for a complex process where determination of the process control variables, sensed parameters to determine these, and optimization of sensing in response to process variation are a difficult problem to resolve. Food processing systems are often cost conscious, and capital costs (e.g., for a robust network and computing system for optimization) are not readily incurred. Further, a food processing system may manufacture a wide variety of products on similar or the same production facilities - for example, to support an entire product line and/or due to seasonal variations. Accordingly, a sensor setup for one process may not support another process well. An example system includes the pattern recognition circuit determining the sensing parameter groups that provide a strong signal response in target outcomes even in light of high variability in system conditions. The pattern recognition circuit can provide for numerous sensed group parameter options available for different process conditions without requiring extensive computing or data storage resources. Additionally, the sensor learning circuit provides for rapid response of the sensing system to changes in the process conditions, including updating the sensed group parameter options to pursue abstracted target outputs without the operator having to understand which sensed parameters best support the output goals. The sensor fusion best suited for a particular application can be converged upon by the sensor learning circuit, but also depends upon the type of component that is subject to predictions, as well as the type of desired outputs pursued by the operator. For example, control of and predictions for pressurization vessels, stirrers, mixers, and/or thermic heating systems are amenable to a sensor fusion with a temperature determination combined with a non-temperature determination, a vibration determination combined with a non-vibration determination, and/or a heat map combined with a rate of change in the heat map and/or a non-heat map determination. An example system includes a sensor fusion with a vibration determination and a non-vibration determination, wherein predictive information for a mixer and/or a stirrer is provided. An example system includes a sensor fusion with a pressure determination, a temperature determination, and/or a non-pressure determination, wherein predictive information for a pressurization vessel is provided.

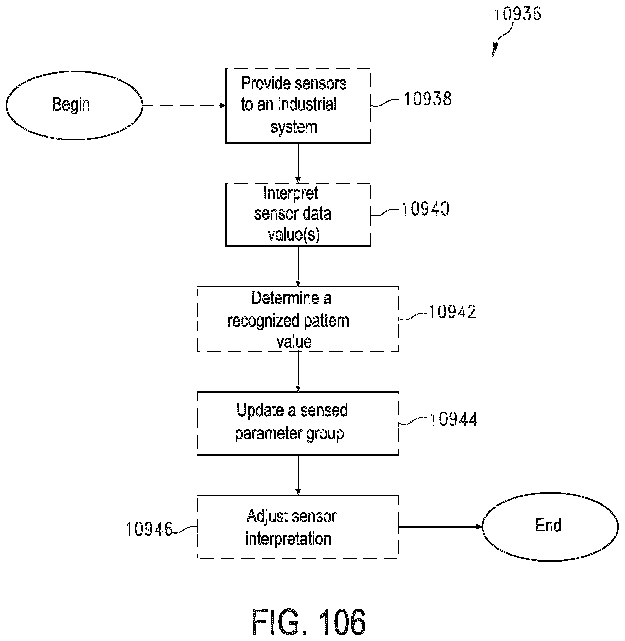

Referencing Figure 106, an example procedure 10936 for data collection in an industrial environment includes an operation 10938 to provide a number of sensors to an industrial system including a number of components, each of the number of sensors operatively coupled to at least one of the number of components. The procedure 10936 further includes an operation 10940 to interpret a number of sensor data values in response to a sensed parameter group, the sensed parameter group including a fused number of sensors from the number of sensors, an operation 10942 to determine a recognized pattern value including a secondary value determined in response to the number of sensor data values, an operation 10944 to update the sensed parameter group in response to the recognized pattern value, and an operation 10946 to adjust the interpreting the number of sensor data values in response to the updated sensed parameter group.

An example procedure 10936 includes an operation to iteratively perform the determining the recognized pattern value and the updating the sensed parameter group to improve a sensing performance value (e.g., by repeating operations 10940 to 10944 periodically, at selected intervals, and/or in response to a system change). An example procedure 10936 includes determining the sensing performance value by determining: a signal-to-noise performance for detecting a value of interest in the industrial system; a network utilization of the plurality of sensors in the industrial system; an effective sensing resolution for a value of interest in the industrial system; a power consumption value for a sensing system in the industrial system, the sensing system including the plurality of sensors; a calculation efficiency for determining the secondary value; an accuracy and/or a precision of the secondary value; a redundancy capacity for determining the secondary value; and/or a lead time value for determining the secondary value.

An example procedure 10936 includes the operation 10944 to update the sensed parameter group by performing at least one operation such as: updating a sensor selection of the sensed parameter group; updating a sensor sampling rate of at least one sensor from the sensed parameter group; updating a sensor resolution of at least one sensor from the sensed parameter group; updating a storage value corresponding to at least one sensor from the sensed parameter group; updating a priority corresponding to at least one sensor from the sensed parameter group; and/or updating at least one of a sampling rate, sampling order, sampling phase, and a network path configuration corresponding to at least one sensor from the sensed parameter group. An example procedure 10936 includes the operation 10942 to determine the recognized pattern value by performing at least one operation such as: determining a signal effectiveness of at least one sensor of the sensed parameter group and the updated sensed parameter group relative to a value of interest; determining a sensitivity of at least one sensor of the sensed parameter group and the updated sensed parameter group relative to the value of interest; determining a predictive confidence of at least one sensor of the sensed parameter group and the updated sensed parameter group relative to the value of interest; determining a predictive delay time of at least one sensor of the sensed parameter group and the updated sensed parameter group relative to the value of interest; determining a predictive accuracy of at least one sensor of the sensed parameter group and the updated sensed parameter group relative to the value of interest; determining a predictive precision of at least one sensor of the sensed parameter group and the updated sensed parameter group relative to the value of interest; and/or updating the recognized pattern value in response to external feedback.

Clause 1. In embodiments, a system for data collection in an industrial environment, the system comprising: an industrial system comprising a plurality of components, and a plurality of sensors each operatively coupled to at least one of the plurality of components; a sensor communication circuit structured to interpret a plurality of sensor data values in response to a sensed parameter group; a pattern recognition circuit structured to determine a recognized pattern value in response to a least a portion of the plurality of sensor data values; and a sensor learning circuit structured to update the sensed parameter group in response to the recognized pattern value; wherein the sensor communication circuit is further structured to adjust the interpreting of the plurality of sensor data values in response to the updated sensed parameter group. 2. The system of clause 1, wherein the sensed parameter group comprises a fused plurality of sensors, and wherein the recognized pattern value further includes a secondary value comprising a value determined in response to the fused plurality of sensors. 3. The system of clause 2, wherein the pattern recognition circuit and sensor learning circuit are further structured to iteratively perform the determining the recognized pattern value and the updating the sensed parameter group to improve a sensing performance value. 4. The system of clause 3, wherein the sensing performance value comprises at least one performance determination selected from the performance determinations consisting of: a signal-to-noise performance for detecting a value of interest in the industrial system; a network utilization of the plurality of sensors in the industrial system; an effective sensing resolution for a value of interest in the industrial system; and a power consumption value for a sensing system in the industrial system, the sensing system including the plurality of sensors. 5. The system of clause 3, wherein the sensing performance value comprises a signal-to-noise performance for detecting a value of interest in the industrial system. 6. The system of clause 3, wherein the sensing performance value comprises a network utilization of the plurality of sensors in the industrial system. 7. The system of clause 3, wherein the sensing performance value comprises an effective sensing resolution for a value of interest in the industrial system. 8. The system of clause 3, wherein the sensing performance value comprises a power consumption value for a sensing system in the industrial system, the sensing system including the plurality of sensors. 9. The system of clause 3, wherein the sensing performance value comprises a calculation efficiency for determining the secondary value. 10 The system of clause 9, wherein the calculation efficiency comprises at least one of: processor operations to determine the secondary value, memory utilization for determining the secondary value, a number of sensor inputs from the plurality of sensors for determining the secondary value, and supporting data long-term storage for supporting the secondary value. 11. The system of clause 3, wherein the sensing performance value comprises one of an accuracy and a precision of the secondary value. 12. The system of clause 3, wherein the sensing performance value comprises a redundancy capacity for determining the secondary value. 13. The system of clause 3, wherein the sensing performance value comprises a lead time value for determining the secondary value. 14. The system of clause 13, wherein the secondary value comprises a component overtemperature value. 15. The system of clause 13, wherein the secondary value comprises one of a component maintenance time, a component failure time, and a component service life. 16. The system of clause 13, wherein the secondary value comprises an off nominal operating condition affecting a product quality produced by an operation of the industrial system. 17. The system of clause 1, wherein the plurality of sensors comprises at least one analog sensor. 18. The system of clause 1, wherein at least one of the sensors comprises a remote sensor. 19. The system of clause 2, wherein the secondary value comprises at least one value selected from the values consisting of: a virtual sensor output value; a process prediction value; a process state value; a component prediction value; a component state value; and a model output value having the sensor data values from the fused plurality of sensors as an input. 20. The system of clause 2, wherein the fused plurality of sensors further comprises at least one pairing of sensor types selected from the pairings consisting of: a vibration sensor and a temperature sensor; a vibration sensor and a pressure sensor; a vibration sensor and an electric field sensor; a vibration sensor and a heat flux sensor; a vibration sensor and a galvanic sensor; and a vibration sensor and a magnetic sensor. 21. The system of clause 1, wherein the sensor learning circuit is further structured to update the sensed parameter group by performing at least one operation selected from the operations consisting of: updating a sensor selection of the sensed parameter group; updating a sensor sampling rate of at least one sensor from the sensed parameter group; updating a sensor resolution of at least one sensor from the sensed parameter group; updating a storage value corresponding to at least one sensor from the sensed parameter group; updating a priority corresponding to at least one sensor from the sensed parameter group; and updating at least one of a sampling rate, sampling order, sampling phase, and a network path configuration corresponding to at least one sensor from the sensed parameter group. 22. The system of clause 21, wherein the pattern recognition circuit is further structured to determine the recognized pattern value by performing at least one operation selected from the operations consisting of: determining a signal effectiveness of at least one sensor of the sensed parameter group and the updated sensed parameter group relative to a value of interest; determining a sensitivity of at least one sensor of the sensed parameter group and the updated sensed parameter group relative to the value of interest; determining a predictive confidence of at least one sensor of the sensed parameter group and the updated sensed parameter group relative to the value of interest; determining a predictive delay time of at least one sensor of the sensed parameter group and the updated sensed parameter group relative to the value of interest; determining a predictive accuracy of at least one sensor of the sensed parameter group and the updated sensed parameter group relative to the value of interest; determining a predictive precision of at least one sensor of the sensed parameter group and the updated sensed parameter group relative to the value of interest; and updating the recognized pattern value in response to external feedback. 23. The system of clause 22, wherein the value of interest comprises at least one value selected from the values consisting of: a virtual sensor output value; a process prediction value; a process state value; a component prediction value; a component state value; and a model output value having the sensor data values from the fused plurality of sensors as an input. 24. The system of clause 2, wherein the pattern recognition circuit is further structured to access cloud-based data comprising a second plurality of sensor data values, the second plurality of sensor data values corresponding to at least one offset industrial system. 25. The system of clause 24, wherein the sensor learning circuit is further structured to access the cloud-based data comprising a second updated sensor parameter group corresponding to the at least one offset industrial system. 26. A method, comprising: providing a plurality of sensors to an industrial system comprising a plurality of components, each of the plurality of sensors operatively coupled to at least one of the plurality of components; interpreting a plurality of sensor data values in response to a sensed parameter group, the sensed parameter group comprising a fused plurality of sensors from the plurality of sensors; determining a recognized pattern value comprising a secondary value determined in response to the plurality of sensor data values; updating the sensed parameter group in response to the recognized pattern value; and adjusting the interpreting the plurality of sensor data values in response to the updated sensed parameter group. 27. The method of clause 26, further comprising iteratively performing the determining the recognized pattern value and the updating the sensed parameter group to improve a sensing performance value. 28. The method of clause 27, further comprising determining the sensing performance value in response to determining at least one of: a signal-to-noise performance for detecting a value of interest in the industrial system; a network utilization of the plurality of sensors in the industrial system; an effective sensing resolution for a value of interest in the industrial system; a power consumption value for a sensing system in the industrial system, the sensing system including the plurality of sensors; a calculation efficiency for determining the secondary value, wherein the calculation efficiency comprises at least one of: processor operations to determine the secondary value, memory utilization for determining the secondary value, a number of sensor inputs from the plurality of sensors for determining the secondary value, and supporting data long-term storage for supporting the secondary value; one of an accuracy and a precision of the secondary value; a redundancy capacity for determining the secondary value; and a lead time value for determining the secondary value. 29. The method of clause 27, wherein updating the sensed parameter group comprises performing at least one operation selected from the operations consisting of: updating a sensor selection of the sensed parameter group; updating a sensor sampling rate of at least one sensor from the sensed parameter group; updating a sensor resolution of at least one sensor from the sensed parameter group; updating a storage value corresponding to at least one sensor from the sensed parameter group; updating a priority corresponding to at least one sensor from the sensed parameter group; and updating at least one of a sampling rate, sampling order, sampling phase, and a network path configuration corresponding to at least one sensor from the sensed parameter group. 30. The method of clause 27, wherein determining the recognized pattern value comprises performing at least one operation selected from the operations consisting of: determining a signal effectiveness of at least one sensor of the sensed parameter group and the updated sensed parameter group relative to a value of interest; determining a sensitivity of at least one sensor of the sensed parameter group and the updated sensed parameter group relative to the value of interest; determining a predictive confidence of at least one sensor of the sensed parameter group and the updated sensed parameter group relative to the value of interest; determining a predictive delay time of at least one sensor of the sensed parameter group and the updated sensed parameter group relative to the value of interest; determining a predictive accuracy of at least one sensor of the sensed parameter group and the updated sensed parameter group relative to the value of interest; determining a predictive precision of at least one sensor of the sensed parameter group and the updated sensed parameter group relative to the value of interest; and updating the recognized pattern value in response to external feedback. 31. A system for data collection in an industrial environment, the system comprising: an industrial system comprising a plurality of components, and a plurality of sensors each operatively coupled to at least one of the plurality of components; a sensor communication circuit structured to interpret a plurality of sensor data values in response to a sensed parameter group, wherein the sensed parameter group comprises a fused plurality of sensors; a means for recognizing a pattern value in response to the sensed parameter group; and a means for updating the sensed parameter group in response to the recognized pattern value. 32. The system of clause 31, further comprising a means for iteratively updating the sensed parameter group. 33. The system of clause 32, further comprising a means for accessing at least one of external data and a second plurality of sensor data values corresponding to an offset industrial system, and wherein the means for iteratively updating the sensed parameter group is further responsive to the at least one of external data and the second plurality of sensor data values. 34. The system of clause 33, further comprising a means for accessing a second sensed parameter group corresponding to the offset industrial system, and wherein the means for iteratively updating is further responsive to the second sensed parameter group. 35. A system for data collection in an industrial environment, the system comprising: an industrial system comprising a plurality of components, and a plurality of sensors each operatively coupled to at least one of the plurality of components; a sensor communication circuit structured to interpret a plurality of sensor data values in response to a sensed parameter group; a pattern recognition circuit structured to determine a recognized pattern value in response to a least a portion of the plurality of sensor data values, wherein the recognized pattern value includes a secondary value comprising a value determined in response to the at least a portion of the plurality of sensors; a sensor learning circuit structured to update the sensed parameter group in response to the recognized pattern value; wherein the sensor communication circuit is further structured to adjust the interpreting the plurality of sensor data values in response to the updated sensed parameter group; and wherein the pattern recognition circuit and the sensor learning circuit are further structured to iteratively perform the determining the recognized pattern value and the updating the sensed parameter group to improve a sensing performance value, wherein the sensing performance value comprises a signal-to-noise performance for detecting a value of interest in the industrial system. 36. The system of clause 35, wherein the sensed parameter group comprises a fused plurality of sensors, and wherein the secondary value comprises a value determined in response to the fused plurality of sensors. 37. The system of clause 36, wherein the secondary value comprises at least one value selected from the values consisting of: a virtual sensor output value; a process prediction value; a process state value; a component prediction value; a component state value; and a model output value having the sensor data values from the fused plurality of sensors as an input. 38. A system for data collection in an industrial environment, the system comprising: an industrial system comprising a plurality of components, and a plurality of sensors each operatively coupled to at least one of the plurality of components; a sensor communication circuit structured to interpret a plurality of sensor data values in response to a sensed parameter group; a pattern recognition circuit structured to determine a recognized pattern value in response to a least a portion of the plurality of sensor data values, wherein the recognized pattern value includes a secondary value comprising a value determined in response to the at least a portion of the plurality of sensors; a sensor learning circuit structured to update the sensed parameter group in response to the recognized pattern value; wherein the sensor communication circuit is further structured to adjust the interpreting the plurality of sensor data values in response to the updated sensed parameter group; and wherein the pattern recognition circuit and the sensor learning circuit are further structured to iteratively perform the determining the recognized pattern value and the updating the sensed parameter group to improve a sensing performance value, wherein the sensing performance value comprises a network utilization of the plurality of sensors in the industrial system. 39. The system of clause 37, wherein the sensed parameter group comprises a fused plurality of sensors, and wherein the secondary value comprises a value determined in response to the fused plurality of sensors. 40. The system of clause 39, wherein the secondary value comprises at least one value selected from the values consisting of: a virtual sensor output value; a process prediction value; a process state value; a component prediction value; a component state value; and a model output value having the sensor data values from the fused plurality of sensors as an input. 41. A system for data collection in an industrial environment, the system comprising: an industrial system comprising a plurality of components, and a plurality of sensors each operatively coupled to at least one of the plurality of components; a sensor communication circuit structured to interpret a plurality of sensor data values in response to a sensed parameter group; a pattern recognition circuit structured to determine a recognized pattern value in response to a least a portion of the plurality of sensor data values, wherein the recognized pattern value includes a secondary value comprising a value determined in response to the at least a portion of the plurality of sensors; a sensor learning circuit structured to update the sensed parameter group in response to the recognized pattern value; wherein the sensor communication circuit is further structured to adjust the interpreting the plurality of sensor data values in response to the updated sensed parameter group; and wherein the pattern recognition circuit and the sensor learning circuit are further structured to iteratively perform the determining the recognized pattern value and the updating the sensed parameter group to improve a sensing performance value, wherein the sensing performance value comprises an effective sensing resolution for a value of interest in the industrial system. 42. The system of clause 41, wherein the sensed parameter group comprises a fused plurality of sensors, and wherein the secondary value comprises a value determined in response to the fused plurality of sensors. 43. The system of clause 42, wherein the secondary value comprises at least one value selected from the values consisting of: a virtual sensor output value; a process prediction value; a process state value; a component prediction value; a component state value; and a model output value having the sensor data values from the fused plurality of sensors as an input. 44. A system for data collection in an industrial environment, the system comprising: an industrial system comprising a plurality of components, and a plurality of sensors each operatively coupled to at least one of the plurality of components; a sensor communication circuit structured to interpret a plurality of sensor data values in response to a sensed parameter group; a pattern recognition circuit structured to determine a recognized pattern value in response to a least a portion of the plurality of sensor data values, wherein the recognized pattern value includes a secondary value comprising a value determined in response to the at least a portion of the plurality of sensors; a sensor learning circuit structured to update the sensed parameter group in response to the recognized pattern value; wherein the sensor communication circuit is further structured to adjust the interpreting the plurality of sensor data values in response to the updated sensed parameter group; and wherein the pattern recognition circuit and the sensor learning circuit are further structured to iteratively perform the determining the recognized pattern value and the updating the sensed parameter group to improve a sensing performance value, wherein the sensing performance value comprises a power consumption value for a sensing system in the industrial system, the sensing system including the plurality of sensors. 45. The system of clause 44, wherein the sensed parameter group comprises a fused plurality of sensors, and wherein the secondary value comprises a value determined in response to the fused plurality of sensors. 46. The system of clause 45, wherein the secondary value comprises at least one value selected from the values consisting of: a virtual sensor output value; a process prediction value; a process state value; a component prediction value; a component state value; and a model output value having the sensor data values from the fused plurality of sensors as an input.

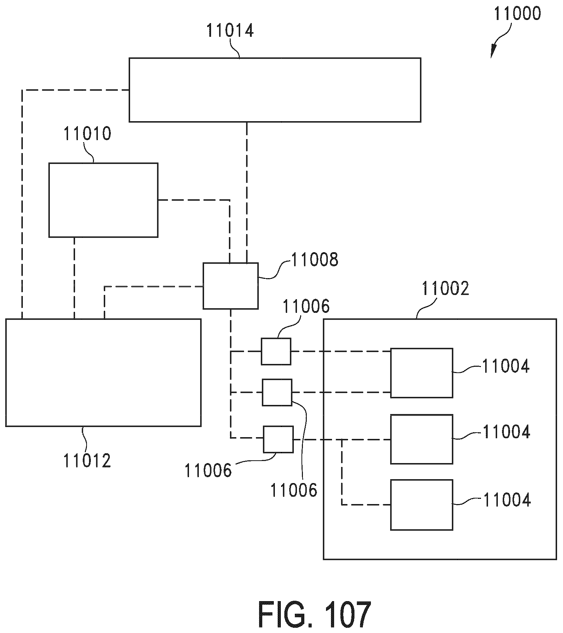

Referencing Figure 107, an example system 11000 for data collection in an industrial environment includes an industrial system 11002 having a number of components 11004, and a number of sensors 11006 each operatively coupled to at least one of the number of components 11004. The selection, distribution, type, and communicative setup of sensors depends upon the application of the system 11000 and/or the context.

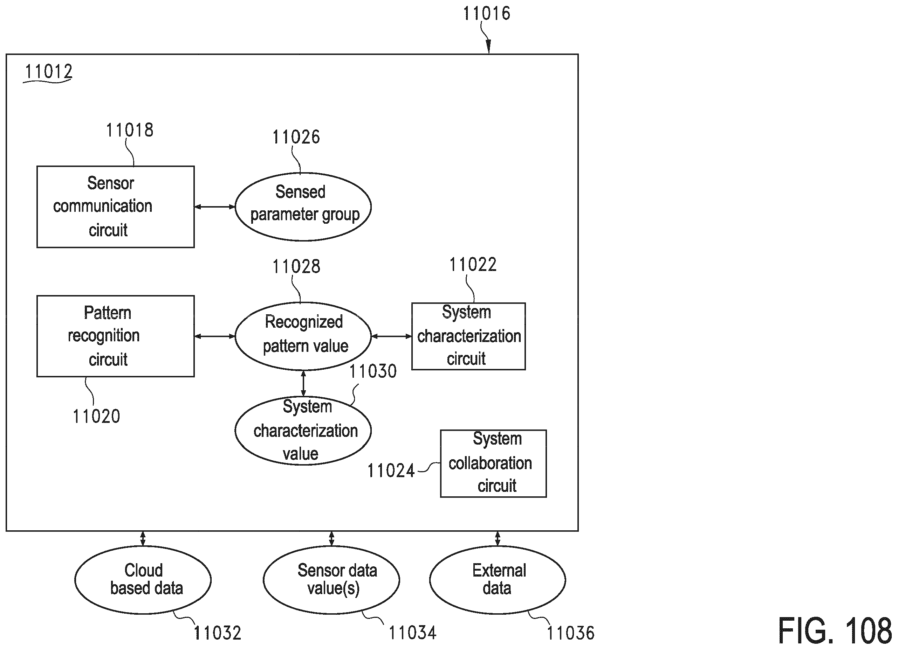

The example system 11000 further includes a sensor communication circuit 11018 (reference Figure 108) that interprets a number of sensor data values 11034 in response to a sensed parameter group 11026. The sensed parameter group 11026 includes a description of which sensors 11006 are sampled at which times, including at least the selected sampling frequency, a process stage wherein a particular sensor may be providing a value of interest, and the like. An example system includes the sensed parameter group 11026 being a number of sensors provided for a sensor fusion operation. In certain embodiments, the sensed parameter group 11026 includes a set of sensors that encompass detection of operating conditions of the system that predict outcomes, off-nominal operations, maintenance intervals, maintenance health states, and/or future state values for any of these, for a process, a component, a sensor, and/or any aspect of interest for the system 11000.

In certain embodiments, sensor data values 11034 are provided to a data collector 11008, which may be in communication with multiple sensors 11006 and/or with a controller 11012. In certain embodiments, a plant computer 11010 is additionally or alternatively present. In the example system, the controller 11012 is structured to functionally execute operations of the sensor communication circuit 11018, pattern recognition circuit 11020, and/or the system characterization circuit 11022, and is depicted as a separate device for clarity of description. Aspects of the controller 11012 may be present on the sensors 11006, the data collector 11008, the plant computer 11010, and/or on a cloud computing device 11014. In certain embodiments, all aspects of the controller 11012 may be present in another device depicted on the system 11000. The plant computer 11010 represents local computing resources, for example processing, memory, and/or network resources, that may be present and/or in communication with the industrial system 11000. In certain embodiments, the cloud computing device 11014 represents computing resources externally available to the industrial system 11000, for example over a private network, intra-net, through cellular communications, satellite communications, and/or over the internet. In certain embodiments, the data collector 11008 may be a computing device, a smart sensor, a MUX box, or other data collection device capable to receive data from multiple sensors and to pass-through the data and/or store data for later transmission. An example data collector 11008 has no storage and/or limited storage, and selectively passes sensor data therethrough, with a subset of the sensor data being communicated at a given time due to bandwidth considerations of the data collector 11008, a related network, and/or imposed by environmental constraints. In certain embodiments, one or more sensors and/or computing devices in the system 11000 are portable devices - for example a plant operator walking through the industrial system may have a smart phone, which the system 11000 may selectively utilize as a data collector 11008, sensor 11006 - for example to enhance communication throughput, sensor resolution, and/or as a primary method for communicating sensor data values 11034 to the controller 11012.

The example system 11000 further includes a pattern recognition circuit 11020 that determines a recognized pattern value 11028 in response to a least a portion of the sensor data values 11034, and a system characterization circuit 11022 that provides a system characterization value 11030 for the industrial system in response to the recognized pattern value 11028. The system characterization value 11030 includes any value determined from the pattern recognition operations of the pattern recognition circuit 11020, including determining that a system condition of interest is present, a component condition of interest is present, an abstracted condition of the system or a component is present (e.g., a product quality value; an operation cost value; a component health, wear, or maintenance value; a component capacity value; and/or a sensor saturation value) and/or is predicted to occur within a time frame (e.g., calendar time, operational time, and/or a process stage) of interest. Pattern recognition operations include determining that operations compatible with a previously known pattern, operations similar to a previously known pattern and/or extrapolated from previously known pattern information (e.g., a previously known pattern includes a temperature response for a first component, and a known or estimated relationship between components allows for a determination that a temperature for a second component will exceed a threshold based upon the pattern recognition for the first component combined with the known or estimated relationship).

Non-limiting descriptions of a number of examples of a system characterization value 11030 are described following. An example system characterization value 11030 includes a predicted outcome for a process associated with the industrial system - for example a product quality description, a product quantity description, a product variability description (e.g., the expected variability of a product parameter predicted according to the operating conditions of the system), a product yield description, a net present value (NPV) for a process, a process completion time, a process chance of completion success, and/or a product purity result. The predicted outcome may be a batch prediction (e.g., a single run, or an integer number of runs, of the process, and the associated predicted outcome), a time based prediction (e.g., the projected outcome of the process over the next day, the next three weeks, until a scheduled shutdown, etc.), a production defined prediction (e.g., the projected outcome over the next 1,000 units, over the next 47 orders, etc.), and/or a rate of change based outcome (e.g., projected for 3 component failures per month, an emissions output per year, etc.). An example system characterization value 11030 includes a predicted future state for a process associated with the industrial system - for example an operating temperature at a given future time, an energy consumption value, a volume in a tank, an emitted noise value at a school adjacent to the industrial system, and/or a rotational speed of a pump. The predicted future state may be time based (e.g., at 4 PM on Thursday), based on a state of the process (e.g., during the third stage, during system shutdown, etc.), and/or based on a future state of particular interest (e.g., peak energy consumption, highest temperature value, maximum noise value, time or process stage when a maximum number of personnel will be within 50 feet of a sensitive area, time or process stage when an aspect of the system redundancy is at a lowest point - e.g., for determining high risk points in a process, etc.). An example system characterization value 11030 includes a predicted off-nominal operation for the process associated with the industrial system - for example when a component capacity of the system will exceed nominal parameters (although, possibly, not experience a failure), when any parameter in the system will be three standard deviations away from normal operations, when a capacity of a component will be under-utilized, etc. An example system characterization value 11030 includes a prediction value for one of the number of components - for example an operating condition at a point in time and/or process stage. An example system characterization value 11030 includes a future state value for one of the number of components. The predicted future state of a component may be time based, based on a state of the process, and/or based on a future state of particular interest (e.g., a highest or lowest value predicted for the component). An example system characterization value 11030 includes an anticipated maintenance health state information for one of the number of components, including at a particular time, a process stage, a lowest value predicted until a next maintenance event, etc. An example system characterization value 11030 includes a predicted maintenance interval for at least one of the number of components (e.g., based on current usage, anticipated usage, planned process operations, etc.). An example system characterization value 11030 includes a predicted off-nominal operation for one of the number of components - for example at a selected time, a process stage, and/or a future state of particular interest. An example system characterization value 11030 includes a predicted fault operation for one of the plurality of components - for example at a selected time, a process stage, any fault occurrence predicted based on current usage, anticipated usage, planned process operations, and/or a future state of particular interest. An example system characterization value 11030 includes a predicted exceedance value for one of the number of components, where the exceedance value includes exceedance of a design specification, and/or exceedance of a selected threshold. An example system characterization value 11030 includes a predicted saturation value for one of the plurality of sensors for example at a selected time, a process stage, any saturation occurrence predicted based on current usage, anticipated usage, planned process operations, and/or a future state of particular interest.

Any values for the prediction value 11030 may be raw values (e.g., a temperature value), derivative values (e.g., a rate of change of a temperature value), accumulated values (e.g., a time spent above one or more temperature thresholds) including weighted accumulated values, and/or integrated values (e.g., an area over a temperature-time curve at a temperature value or temperature trajectory of interest). The provided examples list temperature, but any prediction value 11030 may be utilized, including at least vibration, system throughput, pressure, etc. In certain embodiments, combinations of one or more prediction values 11030 may be utilized.

It will be appreciated in light of the disclosure that combining prediction values 11030 can create particularly powerful combinations for system analysis, control, and risk management, which are specifically contemplated herein. For example, a first prediction value may indicate a time or process stage for a maximum flow rate through the system, and a second prediction value may determine the predicted state of one or more components of the system that is present at that particular time or process stage. In another example, a first prediction value indicates a lowest margin of the system in terms of capacity to deliver (e.g., by determining a point in the process wherein at least one component has a lowest operating margin, and/or where a group of components have a statistically lower operating margin due to the risk induced by a number of simultaneous low operating margins), and a second prediction value testing a system risk (e.g., loss of inlet water, loss of power, increase in temperature, change in environmental conditions that reduce or increase heat transfer, or that preclude the emission of certain effluents), and the combined risk of separate events can be assessed on the total system risk. Additionally, the prediction values may be operated with a sensitivity check (e.g., varying system conditions within margins to determine if some failure may occur), wherein the use of the prediction value allows for the sensitivity check to be performed with higher resolution at high risk points in the process.

An example system 11000 further includes a system collaboration circuit 11024 that interprets external data 11036, and where the pattern recognition circuit 11020 further determines the recognized pattern value 11028 further in response to the external data 11036. External data 11036 includes, without limitation, data provided from outside the system 11000 and/or outside the controller 11012. Non-limiting example external data 11036 include entries from an operator (e.g., indicating a failure, a fault, and/or a service event). An example pattern recognition circuit 11020 further iteratively improves pattern recognition operations in response to the external data 11036 (e.g., where an outcome is known, such as a maintenance event, product quality determination, production outcome determination, etc., the detection of the recognized pattern value 11028 is thereby improved according to the conditions of the system before the known outcome occurred). Example and non-limiting external data 11036 includes data such as: an indicated process success value; an indicated process failure value; an indicated component maintenance event; an indicated component failure event; an indicated process outcome value; an indicated component wear value; an indicated process operational exceedance value; an indicated component operational exceedance value; an indicated fault value; and/or an indicated sensor saturation value.

An example system 11000 further includes a system collaboration circuit 11024 that interprets cloud-based data 11032 including a second number of sensor data values, the second number of sensor data values corresponding to at least one offset industrial system, and where the pattern recognition circuit 11020 further determines the recognized pattern value 11028 further in response to the cloud-based data 11032. An example pattern recognition circuit 11020 further iteratively improves pattern recognition operations in response to the cloud-based data 11032. An example sensed parameter group 11026 includes a triaxial vibration sensor, a vibration sensor and a second sensor that is not a vibration sensor, the second sensor being a digital sensor, and/or a number of analog sensors.

An example system includes an industrial system including an oil refinery. An example oil refinery includes one or more compressors for transferring fluids throughout the plant, and/or for pressurizing fluid streams (e.g., for reflux in a distillation column). Additionally, or alternatively, the example oil refinery includes vacuum distillation, for example to fractionate hydrocarbons. The example oil refinery additionally includes various pipelines in the system for transferring fluids, bringing in feedstock, final product delivery, and the like. An example system includes a number of sensors configured to determine each aspect of a distillation column - for example temperatures of various fluid streams, temperatures, and compositions of individual contact trays in the column, measurements of the feed and reflux, as well as of the effluent or separated products. The design of a distillation column is complex, and optimal design can depend upon the sizing of boilers, compressors, the contact conditions within the column, as well as the composition of feedstock, which can vary significantly. Additionally, the optimal position for effective sensing of conditions in a pipeline can vary with fluid flow rates, environmental conditions (e.g., causing variation in heat transfer rates), the feedstock utilized, and other factors. Additionally, wear or loss of capability in a boiler, compressor, or other operating equipment can change the system response and capabilities, rendering a single point optimization, including where sensors should be positioned and how they should sample data, to be non-optimal as the system ages.

Provision of multiple sensors throughout the system can be costly, not necessarily because the sensors are expensive, but because the sensors provide data that may be prohibitive to transmit, store, and utilize. The example system includes providing a large number of sensors throughout the system, and predicting the future states of components, process variables, products, and/or emissions for the system. The example system utilizes a pattern recognition circuit to determine not only the future predicted state of parameters, but when the future predicted state of parameters will be of interest, and/or will combine with other future predicted state of parameters to create additional risks or opportunities.

Additionally, the system characterization circuit and the system collaboration circuit can improve predictions and/or system characterizations over time, and/or utilizing offset oil refineries, to more robustly make predictions or system characterizations, which can provide for earlier detection, longer term planning for overall enterprise optimization, and/or to allow the industrial system to operate closer to margins. If an unexpected operating condition occurs - for example an off-nominal operation of a compressor, the sensor collaboration circuit is able to migrate the system prediction and improve the capability to detect the conditions that caused the unexpected operating condition in the system, and/or in offset systems. Additionally, alerts for the distillation column, based upon predictions indicating off-nominal operation, marginal operation, high risk operation, and/or upcoming maintenance or potential failures, can be readily prepared to provide visibility to risks that otherwise may not be apparent by simply looking at system capacities and past experience without rigorous analysis.

Example sensor fusion operations for a refinery include vibration information combined with temperatures, pressures, and/or composition (e.g., to determine compressor performance); temperature and pressure, temperature and composition, and/or composition, and pressure (e.g., to determine feedstock variance, contact tray performance, and/or a component failure).

An example refinery system includes storage tanks and/or boiler feed water. Example system determinations include a sensor fusion to determine a storage tank failure and/or off-nominal operation, such as through a temperature and pressure fusion, and/or a vibration determination with a non-vibration determination (e.g., detecting leaks, air in the system, and/or a feed pump issue). Certain further example system predictions include a sensor fusion to determine a boiler feed water failure, such as through a sensor fusion including flow rate, pressure, temperature, and/or vibration. Any one or more of these parameters can be utilized to predict a system leak, failure, wear of a feed pump, and/or scaling.

Similarly, an example industrial system includes a power generation system having a condensate and/or make-up water system, where a sensor fusion provides for a sensed parameter group and prediction of failures, maintenance, and the like. The system characterization circuit, utilizing sensor fusion and/or a continuous machine learning process, can predict failures, off-nominal operations, component health, and/or maintenance events for, without limitation, compressors, piping, storage tanks, and/or boiler feed water for an oil refinery.

An example industrial system includes an irrigation system for a field or a system of fields. Irrigations systems are subject to significant variability in the system (e.g., inlet pressures and/or water levels, component wear and maintenance) as well as environmental variability (e.g., types and distribution of crops planted, weather, soil moisture, humidity, seasonal variability in the sun, cloud coverage, and/or wind variance). Additionally, irrigation systems tend to be remotely located where high bandwidth network access, maintenance facilities, and/or even personnel for oversight are not readily available. An example system includes a multiplicity of sensors capable to enable prediction of conditions for the irrigation system, without requiring that all of the sensors transmit or store data on a continuous basis. The pattern recognition circuit can readily determine the most important set of sensors to effectively predict patterns and thus system conditions requiring a response (e.g., irrigation cycles, positioning, and the like). Additionally, alerts for remote facilities can be readily prepared, with confidence that the correct sensor package is in place for predicting an off-nominal condition (e.g., imminent failure or maintenance requirement for a pump). In certain embodiments, the system may determine an off-nominal process condition such as water feed availability being below normal (e.g., based upon recognized pattern conditions such as recent precipitation history, water production history from the irrigation system or other systems competing for the same water feed), structured news alerts or external data, etc., and update the sensed parameter group, for example to confirm the water feed availability (e.g., a water level sensor in a relevant location), to confirm that acceptable conditions are available that water delivery levels can be dropped (e.g., a humidity sensor, and/or a prompt to a user), and/or to confirm that sufficient available secondary sources are available (e.g., an auxiliary water level sensor).

An example industrial system includes a chemical or pharmaceutical plant. Chemical plants require specific operating conditions, flow rates, temperatures, and the like to maintain proper temperatures, concentrations, mixing, and the like throughout the system. In many systems, there are numerous process steps, and an off-nominal or uncoordinated operation in one part of the process can result in reduced yields, a failed process, and/or a significant reduction in production capacity as coordinated processes must respond (or as coordinated processes fail to respond). Accordingly, a very large number of systems are required to minimally define the system, and in certain embodiments a prohibitive number of sensors are required, from a data transmission and storage viewpoint, to keep sensing capability for a broad range of operating conditions. Additionally, the complexity of the system results in difficulty optimizing and coordinating system operations even where sufficient sensors are present. In certain embodiments, the pattern recognition circuit can predict the sensing parameter groups that provide high resolution understanding of the system, without requiring that all of the sensors store and transmit data continuously. Further, the pattern recognition circuit can highlight the predicted system risks and capacity limitations for upcoming process operations, where the risks are buried in the complex process. Accordingly, this means it can confidently be operated closer to margins, at a lower cost, and/or maintenance or system upgrades can be performed before failures or capacity limitations are experienced.

Further, the utilization of a sensor fusion provides for the opportunity to abstract desired predictions, such as "maximize quality" or "minimize and undesirable side reaction" without requiring a full understanding from the operator of which sensors and system conditions are most effective to achieve the abstracted desired output. Further, the predictive nature of the pattern recognition circuit allows for changes in the process to support the desired outcome to be implemented before the process is committed to a sub-optimal outcome. Example components in a chemical or pharmaceutical plan amenable to control and predictions based on operations of the pattern recognition circuit and/or a sensor fusion operation include an agitator, a pressure reactor, a catalytic reactor, and/or a thermic heating system. Example sensor fusion operations to determine sensed parameter groups and tune the pattern recognition circuit include, without limitation, a vibration sensor combined with another sensor type, a composition sensor combined with another sensor type, a flow rate determination combined with another sensor type, and/or a temperature sensor combined with another sensor type. For example, agitators are amenable to vibration sensing, as well as uniformity of composition detection (e.g., high resolution temperature), expected reaction rates in a properly mixed system, and the like. Catalytic reactors are amenable to temperature sensing (based on the reaction thermodynamics), composition detection (e.g., for expected reactants, as well as direct detection of catalytic material), flow rates (e.g., gross mechanical failure, reduced volume of beads, etc.), and/or pressure detection (e.g., indicative of or coupled with flow rate changes).

An example industrial system includes a food processing system. Example food processing systems include pressurization vessels, stirrers, mixers, and/or thermic heating systems. Control of the process is critical to maintain food safety, product quality, and product consistency. However, most input parameters to the food processing system are subject to high variability - for example basic food products are inherently variable as natural products, with differing water content, protein content, and other aesthetic variation. Additionally, labor cost management, power cost management, and variability in supply water, etc., provide for a complex process where determination of the predictive variables, sensed parameters to determine these, and optimization of predicting in response to process variation are a difficult problem to resolve. Food processing systems are often cost conscious, and capital costs (e.g., for a robust network and computing system for optimization) are not readily incurred. Further, a food processing system may manufacture wide variance of products on similar or the same production facilities, for example to support an entire product line and/or due to seasonal variations, and accordingly a predictive operation for one process may not support another process well. Example systems include the pattern recognition circuit determining the sensing parameter groups that provide a strong signal response in target outcomes even in light of high variability in system conditions. The pattern recognition circuit can provide for numerous sensed group parameter options available for different process conditions without requiring extensive computing or data storage resources, and accordingly achieve relevant predictions for a wide variety of operating conditions. For example, control of and predictions for pressurization vessels, stirrers, mixers, and/or thermic heating systems are amenable to operations of the pattern recognition circuit, and/or a sensor fusion with a temperature determination combined with a non-temperature determination, a vibration determination combined with a non-vibration determination, and/or a heat map combined with a rate of change in the heat map and/or a non-heat map determination. An example system includes a pattern recognition circuit operation and/or a sensor fusion with a vibration determination and a non-vibration determination, wherein predictive information for a mixer and/or a stirrer is provided; and/or with a pressure determination, a temperature determination, and/or a non-pressure determination, wherein predictive information for a pressurization vessel is provided.

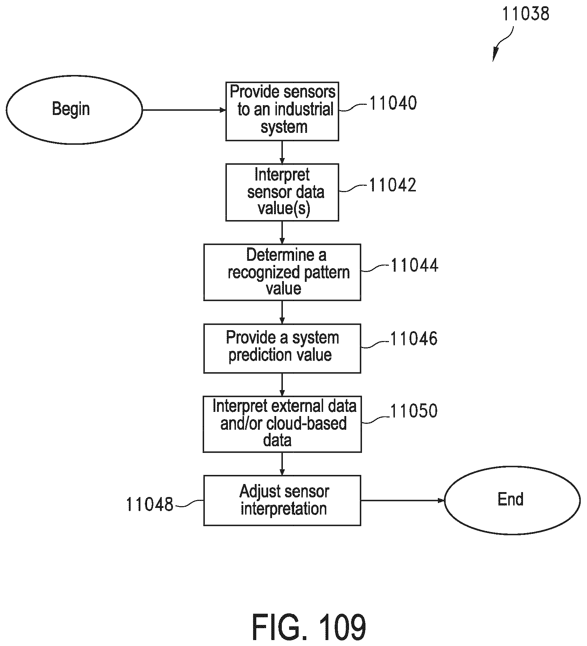

Referencing Figure 109, an example procedure 11038 includes an operation 11040 to provide a number of sensors to an industrial system including a number of components, each of the number of sensors operatively coupled to at least one of the number of components, an operation 11042 to interpret a number of sensor data values in response to a sensed parameter group, the sensed parameter group including at least one sensor of the number of sensors, an operation 11044 to determine a recognized pattern value in response to a least a portion of the number of sensor data values, and an operation 11046 to provide a system characterization value for the industrial system in response to the recognized pattern value.

An example procedure 11038 further includes the operation 11046 to provide the system characterization value by performing an operation such as: determining a predicted outcome for a process associated with the industrial system; determining a predicted future state for a process associated with the industrial system; determining a predicted off-nominal operation for the process associated with the industrial system; determining a prediction value for one of the plurality of components; determining a future state value for one of the plurality of components; determining an anticipated maintenance health state information for one of the plurality of components; determining a predicted maintenance interval for at least one of the plurality of components; determining a predicted off-nominal operation for one of the plurality of components; determining a predicted fault operation for one of the plurality of components; determining a predicted exceedance value for one of the plurality of components; and/or determining a predicted saturation value for one of the plurality of sensors.

An example procedure 11038 includes an operation 11050 to interpret external data and/or cloud-based data, and where the operation 11044 to determine the recognized pattern value is further in response to the external data and/or the cloud-based data. An example procedure 11038 includes an operation to iteratively improve pattern recognition operations in response to the external data and/or the cloud-based data, for example by operation 11048 to adjust the operation 11042 interpreting sensor values, such as by updating the sensed parameter group. The operation to iteratively improve pattern recognition may further include repeating operations 11042 through 11048, periodically, at selected intervals, in response to a system change, and/or in response to a prediction value of a component, process, or the system.

In embodiments, a system for data collection in an industrial environment may comprise: an industrial system comprising a plurality of components, and a plurality of sensors each operatively coupled to at least one of the plurality of components; a sensor communication circuit structured to interpret a plurality of sensor data values in response to a sensed parameter group, the sensed parameter group comprising at least one sensor of the plurality of sensors; a pattern recognition circuit structured to determine a recognized pattern value in response to a least a portion of the plurality of sensor data values; and a system characterization circuit structured to provide a system characterization value for the industrial system in response to the recognized pattern value. In embodiments, a characterization value may include at least one characterization value selected from the characterization values consisting of: a predicted outcome for a process associated with the industrial system; a predicted future state for a process associated with the industrial system; and a predicted off-nominal operation for the process associated with the industrial system. The system characterization value may include at least one characterization value selected from the characterization values consisting of: a prediction value for one of the plurality of components; a future state value for one of the plurality of components; an anticipated maintenance health state information for one of the plurality of components; and a predicted maintenance interval for at least one of the plurality of components. The system characterization value may include at least one characterization value selected from the characterization values consisting of: a predicted off-nominal operation for one of the plurality of components; a predicted fault operation for one of the plurality of components; and a predicted exceedance value for one of the plurality of components. The system characterization value may include a predicted saturation value for one of the plurality of sensors. A system collaboration circuit may be included that is structured to interpret external data, and wherein the pattern recognition circuit is further structured to determine the recognized pattern value further in response to the external data. The pattern recognition circuit may be further structured to iteratively improve pattern recognition operations in response to the external data. The external data may include at least one of: an indicated component maintenance event; an indicated component failure event; an indicated component wear value; an indicated component operational exceedance value; and an indicated fault value. The external data may include at least one of: an indicated process failure value; an indicated process success value; an indicated process outcome value; and an indicated process operational exceedance value. The external data may include an indicated sensor saturation value. A system collaboration circuit may be included that is structured to interpret cloud-based data comprising a second plurality of sensor data values, the second plurality of sensor data values corresponding to at least one offset industrial system, and wherein the pattern recognition circuit is further structured to determine the recognized pattern value further in response to the cloud-based data. The pattern recognition circuit may be further structured to iteratively improve pattern recognition operations in response to the cloud-based data. The sensed parameter group may include a triaxial vibration sensor. The sensed parameter group may include a vibration sensor and a second sensor that is not a vibration sensor, such as where the second sensor comprises a digital sensor. The sensed parameter group may include a plurality of analog sensors.

In embodiments, a method may comprise: providing a plurality of sensors to an industrial system comprising a plurality of components, each of the plurality of sensors operatively coupled to at least one of the plurality of components; interpreting a plurality of sensor data values in response to a sensed parameter group, the sensed parameter group comprising at least one sensor of the plurality of sensors; determining a recognized pattern value in response to a least a portion of the plurality of sensor data values; and providing a system characterization value for the industrial system in response to the recognized pattern value. The system characterization value may be provided by performing at least one operation selected from the operations consisting of: determining a prediction value for one of the plurality of components; determining a future state value for one of the plurality of components; determining an anticipated maintenance health state information for one of the plurality of components; and determining a predicted maintenance interval for at least one of the plurality of components. The system characterization value may be provided by performing at least one operation selected from the operations consisting of: determining a predicted outcome for a process associated with the industrial system; determining a predicted future state for a process associated with the industrial system; and determining a predicted off-nominal operation for the process associated with the industrial system. The system characterization value may be provided by performing at least one operation selected from the operations consisting of: determining a predicted off-nominal operation for one of the plurality of components; determining a predicted fault operation for one of the plurality of components; and determining a predicted exceedance value for one of the plurality of components. The system characterization value may be provided by determining a predicted saturation value for one of the plurality of sensors. Determining the recognized pattern value may be further in response to the external data. Iteratively improving pattern recognition operations may be provided in response to the external data. Interpreting the external data may include at least one operation selected from the operations consisting of: interpreting an indicated component maintenance event; interpreting an indicated component failure event; interpreting an indicated component wear value; interpreting an indicated component operational exceedance value; and interpreting an indicated fault value. Interpreting the external data may include at least one operation selected from the operations consisting of: interpreting an indicated process success value; interpreting an indicated process failure value; interpreting an indicated process outcome value; and interpreting an indicated process operational exceedance value. Interpreting the external data may include interpreting an indicated sensor saturation value. Interpreting cloud-based data may include a second plurality of sensor data values, the second plurality of sensor data values corresponding to at least one offset industrial system, and wherein determining the recognized pattern value is further in response to the cloud-based data. Iteratively improving pattern recognition operations may be provided in response to the cloud-based data.

In embodiments, a system for data collection in an industrial environment may comprise: an industrial system comprising a plurality of components, and a plurality of sensors each operatively coupled to at least one of the plurality of components; a sensor communication circuit structured to interpret a plurality of sensor data values in response to a sensed parameter group, the sensed parameter group comprising at least one sensor of the plurality of sensors; a means for determining a recognized pattern value in response to at least a portion of the plurality of sensor data values; and a means for providing a system characterization value for the industrial system in response to the recognized pattern value. The means for providing the system characterization value may comprise a means for performing at least one operation selected from the operations consisting of: determining a predicted outcome for a process associated with the industrial system; determining a predicted future state for a process associated with the industrial system; and determining a predicted off-nominal operation for the process associated with the industrial system. The means for providing the system characterization value may include a means for performing at least one operation selected from the operations consisting of: determining a prediction value for one of the plurality of components; determining a future state value for one of the plurality of components; determining an anticipated maintenance health state information for one of the plurality of components; and determining a predicted maintenance interval for at least one of the plurality of components. The means for providing the system characterization value may include a means for performing at least one operation selected from the operations consisting of: determining a predicted off-nominal operation for one of the plurality of components; determining a predicted fault operation for one of the plurality of components; and determining a predicted exceedance value for one of the plurality of components. The means for providing the system characterization value may include a means for determining a predicted saturation value for one of the plurality of sensors. A system collaboration circuit may be provided that is structured to interpret external data, and wherein the means for determining the recognized pattern value determines the recognized pattern value further in response to the external data. A means for iteratively improving pattern recognition operations may be provided in response to the external data. The external data may include at least one of: an indicated process success value; an indicated process failure value; and an indicated process outcome value. The external data may include at least one of: an indicated component maintenance event; an indicated component failure event; and an indicated component wear value. The external data may include at least one of: an indicated process operational exceedance value; an indicated component operational exceedance value; and an indicated fault value. The external data may include an indicated sensor saturation value. A system collaboration circuit may be provided that is structured to interpret cloud-based data comprising a second plurality of sensor data values, the second plurality of sensor data values corresponding to at least one offset industrial system, and wherein the means for determining the recognized pattern value determines the recognized pattern value further in response to the cloud-based data. A means for iteratively improving pattern recognition operations may be provided in response to the cloud-based data.

In embodiments, a system for data collection in an industrial environment may comprise: a distillation column comprising a plurality of components, and a plurality of sensors each operatively coupled to at least one of the plurality of components; a sensor communication circuit structured to interpret a plurality of sensor data values in response to a sensed parameter group, the sensed parameter group comprising at least one sensor of the plurality of sensors; a pattern recognition circuit structured to determine a recognized pattern value in response to a least a portion of the plurality of sensor data values; and a system characterization circuit structured to provide a system characterization value for the distillation column in response to the recognized pattern value. The plurality of components may include a thermodynamic treatment component, and wherein the system characterization value comprises at least one value selected from the values consisting of: determining a prediction value for the thermodynamic treatment component; determining a future state value for the thermodynamic treatment component; determining an anticipated maintenance health state information for the thermodynamic treatment component; and determining a process rate limitation according to a capacity of the thermodynamic treatment component. The thermodynamic treatment component may include at least one of a compressor or a boiler.

In embodiments, a system for data collection in an industrial environment may comprise: a chemical process system comprising a plurality of components, and a plurality of sensors each operatively coupled to at least one of the plurality of components; a sensor communication circuit structured to interpret a plurality of sensor data values in response to a sensed parameter group, the sensed parameter group comprising at least one sensor of the plurality of sensors; a pattern recognition circuit structured to determine a recognized pattern value in response to a least a portion of the plurality of sensor data values; and a system characterization circuit structured to provide a system characterization value for the chemical process system in response to the recognized pattern value. The chemical process system may include one of a chemical plant, a pharmaceutical plant, or an oil refinery. The system characterization value may include at least one value selected from the values consisting of: a separation process value comprising at least one of a capacity value or a purity value; a side reaction process value comprising a side reaction rate value; and a thermodynamic treatment value comprising one of a capability, a capacity, and an anticipated maintenance health for a thermodynamic treatment component.

A system for data collection in an industrial environment, the system comprising:

an irrigation system comprising a plurality of components including a pump, and a plurality of sensors each operatively coupled to at least one of the plurality of components; a sensor communication circuit structured to interpret a plurality of sensor data values in response to a sensed parameter group, the sensed parameter group comprising at least one sensor of the plurality of sensors; a pattern recognition circuit structured to determine a recognized pattern value in response to a least a portion of the plurality of sensor data values; and a system characterization circuit structured to provide a system characterization value for the irrigation system in response to the recognized pattern value. The system characterization value may include at least one of an anticipated maintenance health value for the pump and a future state value for the pump. The pattern recognition circuit may determine an off-nominal process condition in response to the at least a portion of the plurality of sensor data values, and wherein the sensor communication circuit is further structured to change the sensed parameter group in response to the off-nominal process condition. The off-nominal process condition may include an indication of below normal water feed availability, and wherein the updated sensed parameter group comprises at least one sensor selected from the sensors consisting of: a water level sensor, a humidity sensor, and an auxiliary water level sensor.

As described elsewhere herein, feedback to various intelligent and/or expert systems, control systems (including remote and local systems, autonomous systems, and the like), and the like, which may comprise rule-based systems, model-based systems, artificial intelligence (AI) systems (including neural nets, self-organizing systems, and others described throughout this disclosure), and various combinations and hybrids of those (collectively referred to herein as the "expert system" except where context indicates otherwise), may include a wide range of information, including measures such as utilization measures, efficiency measures (e.g.,

power, financial such as reduction of costs), measures of success in prediction or anticipation of states (e.g., avoidance and mitigation of faults), productivity measures (e.g., workflow), yield measures, profit measures, and the like, as described herein. In embodiments feedback to the expert system may be industry-specific, domain-specific, factory-specific, machine-specific and the like.

Industry-specific feedback for the expert system may be offered by a third party, such as a repair and maintenance organization, manufacturer, one or more consortia, and the like, or may be generated by one or more elements of the subject system itself. Industry-specific feedback may be aggregated, such as into one or more data structures, wherein the data are aggregated at the component level, equipment level, factory/installation level, and/or industry level. Users of the data structure(s) may access data at any level (e.g., component, equipment, factory, industry, etc.) Users may search the data structure(s) for indicators/predictors based on or filtered by system conditions specific to their need, or update an indicator/predictor with proprietary data to customize the data structure to their industry. In embodiments, the expert system may be seeded with industry-specific feedback, such as in a deep learning fashion, to provide an anticipated outcome or state and/or to perform actions to optimize specific machines, devices, components, processes, and the like.

In embodiments, feedback provided to the expert system may be used in one or more smart bands to predict progress towards one or more goals. The expert system may use the feedback to determine a modification, alteration, addition, change, or the like to one or more components of the system that provided the feedback, as described elsewhere herein. Based on the industry-specific feedback, the expert system may alter an input, a way of treating or storing an input or output, a sensor or sensors used to provide feedback, an operating parameter, a piece of equipment used in the system, or any other aspect of the participants in the industrial system that gave rise to the feedback. As described elsewhere herein, the expert system may track multiple goals, such as with one or more smart bands. Industry-specific feedback may be used in or by the smart bands in predicting an outcome or state relating to the one or more goals, and to recommend or instruct a change that is directed in increasing a likelihood of achieving the outcome or state.

For example, a mixer may be used in a food processing environment or in a chemical processing environment, but the feedback that is relevant in the food processing plant (e.g., required sterilization temperatures, food viscosity, particle density (e.g., such as measured by an optical sensor), completion of cooking (e.g., completion of reactions involved in baking), sanitation (e.g., absence of pathogens) may be different than what is relevant in the chemical processing plant (e.g., impeller speed, velocity vectors, flow rate, absence of high contaminant levels, or the like). This industry specific feedback is useful in optimizing the operation of the mixer in its particular environment.

In another example, the expert system may use feedback from agricultural systems to train a model related to an irrigation system deployed in a field, wherein the industry-specific feedback relates to one or more of an amount of water used across the industry (e.g., such as measured by a flowmeter), a trend of water usage over a time period (e.g., such as measured by a flowmeter), a harvest amount (e.g., such as measured by a weight scale), an insect infestation (e.g., such as identified and/or measured by a drone imaging), a plant death (e.g., such as identified and/or measured by drone imaging), and the like.

In another example of a fluid flow system (e.g., fan, pump or compressor) controlling cooling in the manufacturing industry, the expert system may use feedback from manufacturing of components involving materials (e.g., polymers) that require cooling during the manufacturing process, such as one or more of quality of output product, strength of output product, flexibility of output product, and the like (e.g., such as measured by a suite of sensors, including densitometer, viscometer, size exclusion chromatograph, and torque meter). If the sensors indicate that the polymer is cooling too quickly during monomer conversion, the expert system may relay an instruction to one or more of a fan, pump, or compressor in the fluid flow system to decrease an aspect of its operation in order to meet a quality goal.

In another example of a reciprocating compressor operating in a refinery performing refinery processes (e.g., hydrotreating, hydrocracking, isomerization, reforming), the expert system may use feedback related to one or more of an amount of sulfur, nitrogen and/or aromatics downstream of the compressor (e.g., such as measured by a near infrared ("IR") analyzer), the cetane/octane number or smoke point of a product (e.g., such as with an octane analyzer), the density of a product (e.g., such as measured by a densitometer), byproduct gas amounts (e.g., such as measured by an electrochemical gas sensor), and the like. In this example, as feedback is received during isomerization of butane to isobutene by an inline near IR analyzer measuring the amount and/or quality of isobutene, the expert system may determine that the performance of one or more components of the isomerization system, including the reciprocating compressor, should be altered in order to meet a production goal.

In another example of a vacuum distillation unit operating in a refinery, the expert system may use feedback related to an amount of raw gasoline recovered (e.g., such as by measuring the volume or composition of various fractions using IR), boiling point of recovered fractions (e.g., such as with a boiling point analyzer), a vapor cooling rate (e.g., such as measured by thermometer), and the like. In this example, as feedback is received during vacuum distillation to recover diesel, as the amounts recovered indicate off-nominal rations of production, the expert system may instruct the vacuum distillation unit to alter a feedstock source and initiate more detailed analysis of the prior feedstock.

In yet another example of a pipeline in a refinery, the expert system may use feedback related to flow type (e.g., bubble, stratified, slug, annular, transition, mist) of hydrocarbon products (e.g., such as measured by dye tracing), flow rate, vapor velocity (such as with a flow meter), vapor shear, and the like. In this example, as feedback is received during operation of the pipeline regarding the flow type and its rate, modifications may be recommended by the expert system to improve the flow through the pipeline.

In still another example of a paddle-type or anchor-type agitator/mixer in a pharmaceutical plant, the expert system may use feedback related to degree of mixing of high-viscosity liquids, heating of medium- to low-viscosity liquids, a density of the mixture, a growth rate of an organism in the mixture, and the like. In this example, as feedback is received during operation of the agitator that a bacterial growth rate is too high (such as measured with a spectrophotometer), the expert system may instruct the agitator to reduce its speed to limit the amount of air being added to the mixture or growth substrate.

In a further example of a pressure reactor in a chemical processing plant, the expert system may use feedback related to a catalytic reaction rate (such as measured by a mass spectrometer), a particle density (such as measured by a densitometer), a biological growth rate (such as measured by a spectrophotometer), and the like. In this example, as feedback is received during operation of the pressure reactor that the particle density and biological growth rate are off-nominal, the expert system may instruct the pressure reactor to modify one or more operational parameters, such as a reduction in pressure, an increase in temperature, an increase in volume of the reaction, and the like.

In another example of a gas agitator operating in a chemical processing plant, the expert system may use feedback related to effective density of a gassed liquid, a viscosity, a gas pressure, and the like, as measured by appropriate sensors or equipment. In this example, as feedback is received during operation of the gas agitator, the expert system may instruct the gas agitator to modify one or more operational parameters, such as to increase or decrease a rate of agitation.

In still another example of a pump blasting liquid type agitator in a chemical processing plant, the expert system may use feedback related to a viscosity of a mixture, an optical density of a growth medium, and a temperature of a solution. In this example, as feedback is received during operation of the agitator, the expert system may instruct the agitator to modify one or more operational parameters, such as to increase or decrease a rate of agitation and/or inject additional heat.

In yet another example of a turbine type agitator in a chemical processing plant, the expert system may use feedback related to a vibration noise, a reaction rate of the reactants, a heat transfer, or a density of a suspension. In this example, as feedback is received during operation of the agitator, the expert system may instruct the agitator to modify one or more operational parameters, such as to increase or decrease a rate of agitation and/or inject an additional amount of catalyst.

In yet another example of a static agitator mixing monomers in a chemical processing plant to produce a polymer, the expert system may use feedback related to the viscosity of the polymer, color of the polymer, reactivity of the polymer and the like to iterate to a new setting or parameter for the agitator, such as for example, a setting that alters the Reynolds number, an increase in temperature, a pressure increase, and the like.

In a further example of a catalytic reactor in a chemical processing plant, the expert system may use feedback related to a reaction rate, a product concentration, a product color, and the like. In this example, as feedback is received during operation of the catalytic reactor, the expert system may instruct the reactor to modify one or more operational parameters, such as to increase or decrease a temperature and/or inject an additional amount of catalyst.

In yet a further example of a thermic heating systems in a chemical processing or food plant, the expert system may use feedback related to BTUs out of the system, a flow rate, and the like. In this example, as feedback is received during operation of the thermic heating system, the expert system may instruct the system to modify one or more operational parameters, such as to change the input feedstock, to increase the flow of the feedstock, and the like.

In still a further example of using boiler feed water in a refinery, the expert system may use feedback related to an aeration level, a temperature, and the like. In this example, as feedback is received related to the boiler feed water, the expert system may instruct the system to modify one or more operational parameters of a boiler, such as to increase a reduction in aeration, to increase the flow of the feed water, and the like.

In still a further example of a storage tank in a refinery, the expert system may use feedback related to a temperature, a pressure, a flow rate out of the tank, and the like. In this example, as feedback is received related to the storage tank, the expert system may instruct the system to modify one or more operational parameters of, such as to increase cooling or heating begin agitation, and the like.

In an example of a condensate/make-up water system in a power station that condenses steam from turbines and recirculates it back to a boiler feeder along with make-up water, the expert system may use feedback related to measuring inward air leaks, heat transfer, and make-up water quality. In this example, as feedback is received related to the condensate/make-up water system, the expert system may instruct the system to increase a purification of the make-up water, bring a vacuum pump online, and the like.

In another example of a stirrer in a food plant, the expert system may use feedback related to a viscosity of the food, a color of the food, a temperature of the food, and the like. In this example, as feedback is received, the expert system may instruct the stirrer to speed up or slow down, depending on the predicted success in reaching a goal.

In another example of a pressure cooker in a food plant, the expert system may use feedback related to a viscosity of the food, a color of the food, a temperature of the food, and the like. In this example, as feedback is received, the expert system may instruct the pressure cooker to continue operating, increase a temperature, or the like, depending on the predicted success in reaching a goal.

In an embodiment, a system 11100 for data collection in an industrial environment may include a plurality of input sensors 11102 communicatively coupled to a controller 11106, a data collection circuit 11104 structured to collect output data 11108 from the input sensors 11102, and a machine learning data analysis circuit 11110 structured to receive the output data 11108 and learn received output data patterns 11112 indicative of an outcome, wherein the machine learning data analysis circuit 11110 is structured to learn received output data patterns 11112 by being seeded with a model 11114 based on industry-specific feedback 11118. The model 11114 may be a physical model, an operational model, or a system model. The industry-specific feedback 11118 may be one or more of a utilization measure, an efficiency measure (e.g., power and/or financial), a measure of success in prediction or anticipation of states (e.g., an avoidance and mitigation of faults), a productivity measure (e.g., a workflow), a yield measure, and a profit measure. The industry-specific feedback 11118 includes an amount of power generated by a machine about which the input sensors provide information during operation of the machine. The industry-specific feedback 11118 includes a measure of the output of an assembly line about which the input sensors provide information. The industry-specific feedback 11118 includes a failure rate of units of product produced by a machine about which the input sensors provide information. The industry-specific feedback 11118 includes a fault rate of a machine about which the input sensors provide information. The industry-specific feedback 11118 includes the power utilization efficiency of a machine about which the input sensors provide information, wherein the machine is one of a turbine, a transformer, a generator, a compressor, one that stores energy, and one that includes power train components (e.g., the rate of extraction of a material by a machine about which the input sensors provide information, the rate of production of a gas by a machine about which the input sensors provide information, the rate of production of a hydrocarbon product by a machine about which the input sensors provide information), and the rate of production of a chemical product by a machine about which the input sensors provide information. The machine learning data analysis circuit 11110 may be further structured to learn received output data patterns 11112 based on the outcome. The system 11100 may keep or modify operational parameters or equipment. The controller 11106 may adjust the weighting of the machine learning data analysis circuit 11110 based on the learned received output data patterns 11112 or the outcome, collect more/fewer data points from the input sensors based on the learned received output data patterns 11112 or the outcome, change a data storage technique for the output data 11108 based on the learned received output data patterns 11112 or the outcome, change a data presentation mode or manner based on the learned received output data patterns 11112 or the outcome, and apply one or more filters (low pass, high pass, band pass, etc.) to the output data 11108. In embodiments, the system 11100 may remove/re-task under-utilized equipment based on one or more of the learned received output data patterns 11112 and the outcome. The machine learning data analysis circuit 11110 may include a neural network expert system. The input sensors may measure vibration and noise data. The machine learning data analysis circuit 11110 may be structured to learn received output data patterns 11112 indicative of progress/alignment with one or more goals/guidelines (e.g., which may be determined by a different subset of the input sensors). The machine learning data analysis circuit 11110 may be structured to learn received output data patterns 11112 indicative of an unknown variable. The machine learning data analysis circuit 11110 may be structured to learn received output data patterns 11112 indicative of a preferred input among available inputs. The machine learning data analysis circuit 11110 may be structured to learn received output data patterns 11112 indicative of a preferred input data collection band among available input data collection bands. The machine learning data analysis circuit 11110 may be disposed in part on a machine, on one or more data collectors, in network infrastructure, in the cloud, or any combination thereof. The system 11100 may be deployed on the data collection circuit 11104. The system 11100 may be distributed between the data collection circuit 11104 and a remote infrastructure. The data collection circuit 11104 may include a data collector.

In embodiments, a system 11100 for data collection in an industrial environment may include a plurality of input sensors 11102 communicatively coupled to a controller 11106, a data collection circuit 11104 structured to collect output data 11108 from the input sensors, and a machine learning data analysis circuit 11110 structured to receive the output data 11108 and learn received output data patterns 11112 indicative of an outcome, wherein the machine learning data analysis circuit 11110 is structured to learn received output data patterns 11112 by being seeded with a model 11114 based on a utilization measure.

In embodiments, a system 11100 for data collection in an industrial environment may include a plurality of input sensors 11102 communicatively coupled to a controller 11106, a data collection circuit 11104 structured to collect output data 11108 from the input sensors, and a machine learning data analysis circuit 11110 structured to receive the output data 11108 and learn received output data patterns 11112 indicative of an outcome, wherein the machine learning data analysis circuit 11110 is structured to learn received output data patterns 11112 by being seeded with a model 11114 based on an efficiency measure.

In embodiments, a system 11100 for data collection in an industrial environment may include a plurality of input sensors 11102 communicatively coupled to a controller 11106, a data collection circuit 11104 structured to collect output data 11108 from the input sensors, and a machine learning data analysis circuit 11110 structured to receive the output data 11108 and learn received output data patterns 11112 indicative of an outcome, wherein the machine learning data analysis circuit 11110 is structured to learn received output data patterns 11112 by being seeded with a model 11114 based on a measure of success in prediction or anticipation of states.

In embodiments, a system 11100 for data collection in an industrial environment may include a plurality of input sensors 11102 communicatively coupled to a controller 11106, a data collection circuit 11104 structured to collect output data 11108 from the input sensors, and a machine learning data analysis circuit 11110 structured to receive the output data 11108 and learn received output data patterns 11112 indicative of an outcome, wherein the machine learning data analysis circuit 11110 is structured to learn received output data patterns 11112 by being seeded with a model 11114 based on a productivity measure.

Clause 1. In embodiments, a system for data collection in an industrial environment, comprising: a plurality of input sensors communicatively coupled to a controller; a data collection circuit structured to collect output data from the input sensors; and a machine learning data analysis circuit structured to receive the output data and learn received output data patterns indicative of an outcome, wherein the machine learning data analysis circuit is structured to learn received output data patterns by being seeded with a model based on industry-specific feedback. 2. The system of clause 1, wherein the model is a physical model, an operational model, or a system model. 3. The system of clause 1, wherein the industry-specific feedback is a utilization measure. 4. The system of clause 1, wherein the industry-specific feedback is an efficiency measure. 5. The system of clause 4, wherein the efficiency measure is one of power and financial. 6. The system of clause 1, wherein the industry-specific feedback is a measure of success in prediction or anticipation of states. 7. The system of clause 6, wherein the measure of success is an avoidance and mitigation of faults. 8. The system of clause 1, wherein the industry-specific feedback is a productivity measure. 9.

The system of clause 8, wherein the productivity measure is a workflow. 10. The system of clause 1, wherein the industry-specific feedback is a yield measure. 11. The system of clause 1, wherein the industry-specific feedback is a profit measure. 12. The system of clause 1, wherein the machine learning data analysis circuit is further structured to learn received output data patterns based on the outcome. 13. The system of clause 1, wherein the system keeps or modifies operational parameters or equipment. 14. The system of clause 1, wherein the controller adjusts the weighting of the machine learning data analysis circuit based on the learned received output data patterns or the outcome. 15. The system of clause 1, wherein the controller collects more/fewer data points from the input sensors based on the learned received output data patterns or the outcome. 16. The system of clause 1, wherein the controller changes a data storage technique for the output data based on the learned received output data patterns or the outcome. 17. The system of clause 1, wherein the controller changes a data presentation mode or manner based on the learned received output data patterns or the outcome. 18. The system of clause 1, wherein the controller applies one or more filters (low pass, high pass, band pass, etc.) to the output data. 19. The system of clause 1, wherein the system removes/re-tasks under-utilized equipment based on one or more of the learned received output data patterns and the outcome. 20. The system of clause 1, wherein the machine learning data analysis circuit comprises a neural network expert system. 21. The system of clause 1, wherein the input sensors measure vibration and noise data. 22. The system of clause 1, wherein the machine learning data analysis circuit is structured to learn received output data patterns indicative of progress/alignment with one or more goals/guidelines. 23. The system of clause 22, wherein progress/alignment of each goal/guideline is determined by a different subset of the input sensors. 24. The system of clause 1, wherein the machine learning data analysis circuit is structured to learn received output data patterns indicative of an unknown variable. 25. The system of clause 1, wherein the machine learning data analysis circuit is structured to learn received output data patterns indicative of a preferred input among available inputs. 26. The system of clause 1, wherein the machine learning data analysis circuit is structured to learn received output data patterns indicative of a preferred input data collection band among available input data collection bands. 27. The system of clause 1, wherein the machine learning data analysis circuit is disposed in part on a machine, on one or more data collectors, in network infrastructure, in the cloud, or any combination thereof. 28. The system of clause 1, wherein the system is deployed on the data collection circuit. 29. The system of clause 1, wherein the system is distributed between the data collection circuit and a remote infrastructure. 30. The system of clause 1, wherein the industry-specific feedback includes an amount of power generated by a machine about which the input sensors provide information during operation of the machine. 31. The system of clause 1, wherein the industry-specific feedback includes a measure of the output of an assembly line about which the input sensors provide information. 32. The system of clause 1, wherein the industry-specific feedback includes a failure rate of units of product produced by a machine about which the input sensors provide information. 33. The system of clause 1, wherein the industry-specific feedback includes a fault rate of a machine about which the input sensors provide information. 34. The system of clause 1, wherein the industry-specific feedback includes the power utilization efficiency of a machine about which the input sensors provide information. 35. The system of clause 34, wherein the machine is a turbine. 36. The system of clause 34, wherein the machine is a transformer. 37. The system of clause 34, wherein the machine is a generator. 38. The system of clause 34, wherein the machine is a compressor. 39. The system of clause 34, wherein the machine stores energy. 40. The system of clause 1, wherein the machine includes power train components. 41. The system of clause 34, wherein the industry-specific feedback includes the rate of extraction of a material by a machine about which the input sensors provide information. 42. The system of clause 34, wherein the industry-specific feedback includes the rate of production of a gas by a machine about which the input sensors provide information. 43. The system of clause 34, wherein the industry-specific feedback includes the rate of production of a hydrocarbon product by a machine about which the input sensors provide information. 44. The system of clause 34, wherein the industry-specific feedback includes the rate of production of a chemical product by a machine about which the input sensors provide information. 45. The system of clause 1, wherein the data collection circuit comprises a data collector. 46. A system for data collection in an industrial environment, comprising: a plurality of input sensors communicatively coupled to a controller; a data collection circuit structured to collect output data from the input sensors; and a machine learning data analysis circuit structured to receive the output data and learn received output data patterns indicative of an outcome, wherein the machine learning data analysis circuit is structured to learn received output data patterns by being seeded with a model based on a utilization measure. 47. A system for data collection in an industrial environment, comprising: a plurality of input sensors communicatively coupled to a controller; a data collection circuit structured to collect output data from the input sensors; and a machine learning data analysis circuit structured to receive the output data and learn received output data patterns indicative of an outcome, wherein the machine learning data analysis circuit is structured to learn received output data patterns by being seeded with a model based on an efficiency measure. 48. A system for data collection in an industrial environment, comprising: a plurality of input sensors communicatively coupled to a controller; a data collection circuit structured to collect output data from the input sensors; and a machine learning data analysis circuit structured to receive the output data and learn received output data patterns indicative of an outcome, wherein the machine learning data analysis circuit is structured to learn received output data patterns by being seeded with a model based on a measure of success in prediction or anticipation of states. 49. A system for data collection in an industrial environment, comprising: a plurality of input sensors communicatively coupled to a controller; a data collection circuit structured to collect output data from the input sensors; and a machine learning data analysis circuit structured to receive the output data and learn received output data patterns indicative of an outcome, wherein the machine learning data analysis circuit is structured to learn received output data patterns by being seeded with a model based on a productivity measure.

In embodiments, a system for data collection in an industrial environment may include an expert system graphical user interface in which a user may, by interacting with a graphical user interface element, set a parameter of a data collection band for collection by a data collector. The parameter may relate to at least one of setting a frequency range for collection and setting an extent of granularity for collection.

In embodiments, a system for data collection in an industrial environment may include an expert system graphical user interface in which a user may, by interacting with a graphical user interface element, identify a set of sensors among a larger set of available sensors for collection by a data collector. The user interface may include views of available data collectors, their capabilities, one or more corresponding smart bands, and the like.

In embodiments, a system for data collection in an industrial environment may include an expert system graphical user interface in which a user may, by interacting with a graphical user interface element, select a set of inputs to be multiplexed among a set of available inputs.

In embodiments, a system for data collection in an industrial environment may include an expert system graphical user interface in which a user may, by interacting with a graphical user interface element, select a component of an industrial machine displayed in the graphical user interface for data collection, view a set of sensors that are available to provide data about the industrial machine, and select a subset of sensors for data collection.

In embodiments, a system for data collection in an industrial environment may include an expert system graphical user interface in which a user may, by interacting with a graphical user interface element, view a set of indicators of fault conditions of one or more industrial machines, where the fault conditions are identified by application of an expert system to data collected from a set of data collectors. In embodiments, the fault conditions may be identified by manufacturers of portions of the one or more industrial machines. The fault conditions may be identified by analysis of industry trade data, third-party testing agency data, industry standards, and the like. In embodiments, a set of indicators of fault conditions of one or more industrial machines may include indicators of stress, vibration, heat, wear, ultrasonic signature, operational deflection shape, and the like, optionally including any of the widely varying conditions that can be sensed by the types of sensors described throughout this disclosure and the documents incorporated herein by reference.

In embodiments, a system for data collection in an industrial environment may include an expert graphical user interface that enables a user to select from a list of component parts of an industrial machine for establishing smart-band monitoring and in response thereto presents the user with at least one smart-band definition of an acceptable range of values for at least one sensor of the industrial machine and a list of correlated sensors from which data will be gathered and analyzed when an out of acceptable range condition is detected from the at least one sensor.

In embodiments, a system for data collection in an industrial environment may include an expert graphical user interface that enables a user to select from a list of conditions of an industrial machine for establishing smart-band monitoring and, in response thereto, presents the user with at least one smart-band definition of an acceptable range of values for at least one sensor of the industrial machine and a list of correlated sensors from which data will be gathered and analyzed when an out of acceptable range condition is detected from the at least one sensor.

In embodiments, a system for data collection in an industrial environment may include an expert graphical user interface that enables a user to select from a list of reliability measures of an industrial machine for establishing smart-band monitoring and, in response thereto, presents the user with at least one smart-band definition of an acceptable range of values for at least one sensor of the industrial machine and a list of correlated sensors from which data will be gathered and analyzed when an out of acceptable range condition is detected from the at least one sensor. In the system, the reliability measures may include one or more of industry average data, manufacturer's specifications, material specifications, recommendations, and the like. In embodiments, reliability measures may include measures that correlate to failures, such as stress, vibration, heat, wear, ultrasonic signature, operational deflection shape effect, and the like. In embodiments, manufacturer's specifications may include cycle count, working time, maintenance recommendations, maintenance schedules, operational limits, material limits, warranty terms, and the like. In embodiments, the sensors in the industrial environment may be correlated to manufacturer's specifications by associating a condition being sensed by the sensor to a specification type. In embodiments, a non-limiting example of correlating a sensor to a manufacturer's specification may include a duty cycle specification being correlated to a sensor that detects revolutions of a moving part. In embodiments, a temperature specification may correlate to a thermal sensor disposed to sense an ambient temperature proximal to the industrial machine.

In embodiments, a system for data collection in an industrial environment may include an expert graphical user interface that automatically creates a smart-band group of sensors disposed in the industrial environment in response to receiving a condition of the industrial environment for monitoring and an acceptable range of values for the condition.

In embodiments, a system for data collection in an industrial environment may include an expert graphical user interface that presents a representation of components of an industrial machine deployable in the industrial environment on an electronic display, and in response to a user selecting one or more of the components, searches a database of industrial machine failure modes for modes involving the selected component(s) and conditions associated with the failure mode(s) to be monitored, and further identifies a plurality of sensors in, on, or available to be disposed on the presented machine representation from which data will automatically be captured when the condition(s) to be monitored are detected to be outside of an acceptable range. In embodiments, the identified plurality of sensors includes at least one sensor through which the condition(s) will be monitored.

In embodiments, a system for data collection in an industrial environment may include a user interface for working with smart bands that may facilitate a user identifying sensors to include in a smart band group of sensors by selecting sensors presented on a map of a machine in the environment. A user may be guided to select among a subset of all possible sensors based on smart band criteria, such as types of sensor data required for the smart band. A smart band may be focused on detecting trending conditions in a portion of the industrial environment; therefore, the user interface may direct the user choose among an identified subset of sensors, such as by only allowing sensors proximal to the smart band directed portion of the environment to be selectable in the user interface.

In embodiments, a smart band data collection configuration and deployment user interface may include views of components in an industrial environment and related available sensors. In embodiments, in response to selection of a component part of an industrial machine depicted in the user interface, sensors associated with smart band data collection for the component part may be highlighted so that the user may select one or more of the sensors. User selection in this context may comprise a verification of an automatic selection of sensors, or manually identifying sensors to include in the smart band sensor group.

In embodiments, in response to selection of a smart band condition, such as trending of bearing temperature, a user interface for smart band configuration and use may automatically identify and present sensors that contribute to smart band analysis for the condition. A user may responsive to this presentation of sensors, confirm or otherwise acknowledge one or more sensors individually or as a set to be included in the smart band data collection group.

In embodiments, a smart band user interface may present locations of industrial machines in an industrial environment on a map. The locations may be annotated with indicators of smart band data collection templates that are configured for collecting smart band data for the machines at the annotated locations. The locations may be color coded to reflect a degree of smart band coverage for a machine at the location. In embodiments, a location of a machine with a high degree of smart band coverage may be colored green, whereas a location of a machine with low smart band coverage may be colored red or some other contrasting color. Other annotations, such as visual annotations may be used. A user may select a machine at a location and by dragging the selected machine to a location of a second machine, effectively configure smart bands for the second machine that correspond to smart bands for the first machine. In this way, a user may configure several smart band data collection templates for a newly added machine or a new industrial environment and the like.

In embodiments, various configurations and selections of smart bands may be stored for use throughout a data collection platform, such as for selecting templates for sensing, templates for routing, provisioning of devices and the like, as well as for direct the placement of sensors, such as by personnel or by machines, such as autonomous or remote-control drones.

In embodiments, a smart band user interface may present a map of an industrial environment that may include industrial machines, machine-specific data collectors, mobile data collectors (robotic and human), and the like. A user may view a list of smart band data collection actions to be performed and may select a data collection resource set to undertake the collection. In an example, a guided mobile robot may be equipped with data collection systems for collecting data for a plurality of smart band data sets. A user may view an industrial environment with which the robot is associated and assign the robot to perform a smart band data collection activity by selecting the robot, a smart band data collection template, and a location in the industrial environment, such as a machine or a part of a machine. The user interface may provide a status of the collection undertaking so that the user can be informed when the data collection is complete.

In embodiments, a smart band operation management user interface may include presentation of smart band data collection activity, analysis of results, actions taken based on results, suggestions for changes to smart band data collection (e.g., addition of sensors to a smart band collection template, increasing duration of data collection for a template-specific collection activity), and the like. The user interface may facilitate "what if" type analysis by presenting potential impacts on reliability, costs, resource utilization, data collection tradeoffs, maintenance schedule impacts, risk of failure (increase/-decrease), and the like in response to a user's attempt to make a change to a smart band data collection template, such as a user relaxing a threshold for performing smart band data collection and the like. In embodiments, a user may select or enter a target budget for preventive maintenance per unit time (e.g., per month, quarter, and the like) into the user interface and an expert system of the user interface may recommend a smart band data collection template and thresholds for complying with the budget.

In embodiments, a smart band user interface may facilitate a user configuring a system for data collection in an industrial environment for smart band data gathering. The user interface may include display of industrial machine components, such as motors, linkages, bearings, and the like that a user may select. In response to such a selection, an expert system may work with the user interface to present a list of potential failure conditions related to the part to monitor. The user may select one or more conditions to monitor. The user interface may present the conditions to monitor as a set that the user may be asked to approve. The user may indicate acceptance of the set or of select conditions in the set monitor. As a follow-on to a user selection/approval of one or more conditions to monitor, the user interface may display a map of relevant sensors available in the industrial environment for collecting data as a smart band group of sensors. The relevant sensors may be associated with one or more parts (e.g., the part(s) originally selected by the user), one or more failure conditions, and the like.

In embodiments, the expert system may compare the relevant sensors in the environment to a preferred set of sensors for smart band monitoring of the failure condition(s) and provide feedback to the user, such as a confidence factor for performing smart band monitoring based on the available sensors for the failure condition(s). The user may evaluate the failure condition and smart band analysis information presented and may take an action in the user interface, such as approving the relevant sensors. In response, a smart band data collection template for configuring the data collection system may be created. In embodiments, a smart band data collection template may be created independently of a user approval. In such embodiments, the user may indicate explicitly or implicitly via approval of the smart band analysis information an approval of the created template.

In embodiments, a smart band user interface may work with an expert system to present candidate portions of an industrial machine in an industrial environment for smart band condition monitoring based on information such as manufacturer's specifications, statistical information derived from real-world experience with similar industrial machines, and the like. In embodiments, the user interface may permit a user to select certain aspects of the smart band data collection and analysis process including - for example, a degree of reliability/-failure risk to monitor (e.g., near failure, best performance, industry average, and the like). In response thereto, the expert system may adjust an aspect of the smart band analysis, such as a range of acceptable value to monitor, a monitor frequency, a data collection frequency, a data collection amount, a priority for the data collection activity (e.g., effectively a priority of a template for data collection for the smart band), weightings of data from sensors (e.g., specific sensors in the group, types of sensors, and the like).

In embodiments, a smart bands user interface may be structured to allow a user to let an expert system recommend one or more smart bands to implement based on a range of comparative data that the user might prioritize, such as industry average data, industry best data, near-by comparable machines, most similarly configured machines, and the like. Based on the comparative data weighting, the expert system may use the user interface to recommend one or more smart band templates that align with the weighting to the user, who may take an action in the user interface, such as approving one or more of the recommended templates for use.

In embodiments, a user interface for configuring arrangement of sensors in an industrial environment may include recommendations by industrial environment equipment suppliers (e.g., manufacturers, wholesalers, distributors, dealers, third-party consultants, and the like) of group(s) of sensors to include for performing smart band analysis of components of the industrial equipment. The information may be presented to a user as data collection template(s) that the user may indicate as being accepted/approved, such as by positioning a graphic representing a template(s) over a portion of the industrial equipment.

In embodiments, a smart band discovery portal may facilitate sharing of smart band related information, such as recommendations, actual use cases, results of smart band data collection and processing, and the like. The discovery portal may be embodied as a panel in a smart band user interface.

In embodiments, a smart band assessment portal may facilitate assessment of smart band-based data collection and analysis. Content that may be presented in such a portal may include depictions of uses of existing smart band templates for one or more industrial machines, industrial environments, industries, and the like. A value of a smart band may be ascribed to each smart band in the portal based, for example, on historical use and outcomes. A smart band assessment portal may also include visualization of candidate sensors to include in a smart band data collection template based on a range of factors including ascribed value, preventive maintenance costs, failure condition being monitored, and the like.

In embodiments, a smart bands graphical user interface associated with a system for data collection in an industrial environment may be deployed for industrial components, such as of factory-based air conditioning units. A user interface of a system for data collection for smart band analysis of air conditioning units may facilitate graphical configuration of smart band data collection templates and the like for specific air conditioning system installations. In embodiments, major components of an air conditioning system, such as a compressor, condenser, heat exchanger, ducting, coolant regulators, filters, fans, and the like along with corresponding sensors for a particular installation of the air conditioning system may be depicted in a user interface. A user may select one or more of these components in the user interface for configuring a system for smart band data collection. In response to the user selecting, for example, a coolant compressor, sensors associated with the compressor may be automatically identified in the user interface. The user may be presented with a recommended data collection template to perform smart band data collection for the selected compressor. Alternatively, the user may request a candidate collection template from a community of smart band users, such as through a smart band template sharing panel of the user interface. Once a template is selected, the user interface may offer the user customization options, such as frequency of collection, degree of reliability to monitor, and the like. Upon final acceptance of the template, the user interface may interact with a data collection system of the installed air conditioning system (if such a system is available) to implement the data collection template and provide an indication to the user of the result of implementing the template. In response thereto, the user may make a final approval of the template for use with the air conditioning unit.

In embodiments, a smart bands graphical user interface associated with a system for data collection in an industrial environment may be deployed for oil and gas refinery-based chillers. A user interface of a system for data collection for smart band analysis of refinery-based chillers may facilitate graphical configuration of smart band data collection templates and the like for specific refinery-based chiller installations. In embodiments, major components of a refinery-based chiller including heat exchangers, compressors, water regulators and the like along with corresponding sensors for the particular installation of the refinery-based chiller may be depicted in a user interface. A user may select one or more of these components in the user interface for configuring a system for smart band data collection. In response to the user selecting, for example, water regulators, sensors associated with the water regulators may be automatically identified in the user interface. The user may be presented with a recommended data collection template to perform smart band data collection for the selected component. Alternatively, the user may request a candidate collection template from a community of smart band users, such as through a smart band template sharing panel of the user interface. Once a template is selected, the user interface may offer the user customization options, such as frequency of collection, degree of reliability to monitor, and the like. Upon final acceptance of the template, the user interface may interact with a data collection system of the installed refinery-based chiller (if such a system is available) to implement the data collection template and provide an indication to the user of the result of implementing the template. In response thereto, the user may make a final approval of the template for use with the refinery-based chiller.

In embodiments, a smart bands graphical user interface associated with a system for data collection in an industrial environment may be deployed for automotive production line robotic assembly systems. A user interface of a system for data collection for smart band analysis of production line robotic assembly systems may facilitate graphical configuration of smart band data collection templates and the like for specific production line robotic assembly system installations. In embodiments, major components of a production line robotic assembly system including motors, linkages, tool handlers, positioning systems and the like along with corresponding sensors for the particular installation of the production line robotic assembly system may be depicted in a user interface. A user may select one or more of these components in the user interface for configuring a system for smart band data collection. In response to the user selecting, for example, robotic linkage sensors associated with the robotic linkages may be automatically identified in the user interface. The user may be presented with a recommended data collection template to perform smart band data collection for the selected component. Alternatively, the user may request a candidate collection template from a community of smart band users, such as through a smart band template sharing panel of the user interface. Once a template is selected, the user interface may offer the user customization options, such as frequency of collection, degree of reliability to monitor, and the like. Upon final acceptance of the template, the user interface may interact with a data collection system of the installed production line robotic assembly system (if such a system is available) to implement the data collection template and provide an indication to the user of the result of implementing the template. In response thereto, the user may make a final approval of the template for use with the production line robotic assembly system.

In embodiments, a smart bands graphical user interface associated with a system for data collection in an industrial environment may be deployed for automotive production line robotic assembly systems. A user interface of a system for data collection for smart band analysis of production line robotic assembly systems may facilitate graphical configuration of smart band data collection templates and the like for specific production line robotic assembly system installations. In embodiments, major components of construction site boring machinery, such as the cutter head, which itself is a subsystem that may have many components, control systems, debris handling and conveying components, precast concrete delivery and installation subsystems and the like along with corresponding sensors for the particular installation of the production line robotic assembly system may be depicted in a user interface. A user may select one or more of these components in the user interface for configuring a system for smart band data collection. In response to the user selecting, for example, debris handling components sensors associated with the debris handling components, such as a conveyer may be automatically identified in the user interface. The user may be presented with a recommended data collection template to perform smart band data collection for the selected component. Alternatively, the user may request a candidate collection template from a community of smart band users, such as through a smart band template sharing panel of the user interface. Once a template is selected, the user interface may offer the user customization options, such as frequency of collection, degree of reliability to monitor, and the like. Upon final acceptance of the template, the user interface may interact with a data collection system of the installed production line robotic assembly system (if such a system is available) to implement the data collection template and provide an indication to the user of the result of implementing the template. In response thereto, the user may make a final approval of the template for use with the production line robotic assembly system.

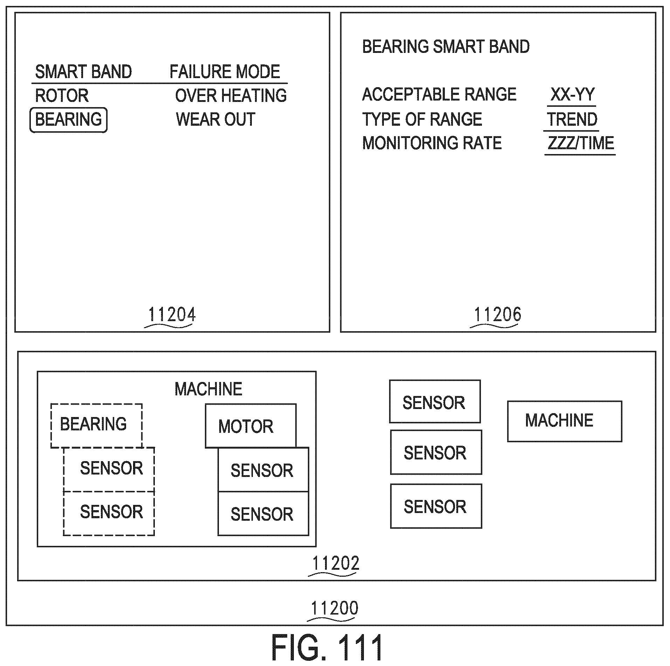

Referring to Figure 111, an exemplary user interface for smart band configuration of a system for data collection in an industrial environment is depicted. The user interface 11200 may include an industrial environment visualization portion 11202 in which may be depicted one or more sensors, machines, and the like. Each sensor, machine, or portion thereof (e.g., motor, compressor, and the like) may be selectable as part of a smart-band configuration process. Likewise, each sensor, machine or portion thereof may be visually highlighted during the smart-band configuration process, such as in response to user selection, or automated identification as being part of a group of smart band sensors. The user interface may also include a smart band selection portion 11204 or panel in which smart band indicators, failure modes, and the like may be depicted in selectable elements. User selection of a symptom, failure mode and the like may cause corresponding components, sensors, machines, and the like in the industrial visualization portion to be highlighted. The user interface may also include a customization panel 11206 in which attributes of a selected smart band, such as acceptable ranges, frequency of monitoring and the like may be made available for a user to adjust.

Cause 1. In embodiments, a system comprising: a user interface comprising: a selectable graphical element that facilitates selection of a representation of a component of an industrial machine from an industrial environment in which a plurality of sensors is deployed from which a data collection system collects data for the system for which the user interface enables interaction; and selectable graphical elements representing a portion of the plurality of sensors that facilitate selection of a sensors to form a data collection subset of sensors in the industrial environment. 2. The system of clause 1, wherein selection of sensors to form a data collection subset results in a data collection template adapted to facilitate configuring the data routing and collection system for collecting data from the data collection subset of sensors. 3. The system of clause 1, wherein the user interface comprises an expert system that analyzes a user selection of a graphical element that facilitates selection of a component and adjusts the selectable graphical elements representing a portion of the plurality of sensors to activate only sensors associated with a component associated with the selected graphical element. 4. The system of clause 1, wherein the selectable graphical element that facilitates selection of a component of an industrial machine further facilitates presentation of a plurality of data collection templates associated with the component. 5. The system of clause 1, wherein the portion of the plurality of sensors comprises a smart band group of sensors. 6. The system of clause 5, wherein the smart band group of sensors comprises sensors for a component of the industrial machine selected by the selectable graphical element. 7. A system comprising: an expert graphical user interface comprising representations of a plurality of components of an industrial machine from an industrial environment in which a plurality of sensors is deployed from which a data collection system collects data for the system for which the user interface enables interaction, wherein at least one representation of the plurality of components is selectable by a user in the user interface; a database of industrial machine failure modes; and a database searching facility that searches the database of failure modes for modes that correspond to a user selection of a component of the plurality of components. 8. The system of clause 7, comprising a database of conditions associated with the failure modes. 9. The system of clause 8, wherein the database of conditions includes a list of sensors in the industrial environment associated with the condition. 10. The system of clause 9, wherein the database searching facility further searches the database of conditions for sensors that correspond to at least one condition and indicates the sensors in the graphical user interface. 11. The system of clause 7, wherein the user selection of a component of the plurality of components causes a data collection template for configuring the data routing and collection system to automatically collect data from sensors associated with the selected component. 12. A method comprising: presenting in an expert graphical user interface a list of reliability measures of an industrial machine; facilitating user selection of one reliability measure from the list; presenting a representation of a smart band data collection template associated with the selected reliability measure; and in response to a user indication of acceptance of the smart band data collection template, configuring a data routing and collection system to collect data from a plurality of sensors in an industrial environment in response to a data value from one of the plurality of sensors being detected outside of an acceptable range of data values. 13. The method of clause 12, wherein the reliability measures include one or more of industry average data, manufacturer's specifications, manufacturer's material specifications, and manufacturer's recommendations. 14. The method of clause 13, wherein include the manufacturer's specifications include at least one of cycle count, working time, maintenance recommendations, maintenance schedules, operational limits, material limits, and warranty terms. 15. The method of clause 12, wherein the reliability measures correlate to failures selected from the list consisting of stress, vibration, heat, wear, ultrasonic signature, and operational deflection shape effect. 16. The method of clause 12, further comprising correlating sensors in the industrial environment to manufacturer's specifications. 17. The method of clause 16, wherein correlating comprises matching a duty cycle specification to a sensor that detects revolutions of a moving part. 18. The method of clause 16, wherein correlating comprises matching a temperature specification with a thermal sensor disposed to sense an ambient temperature proximal to the industrial machine. 19. The method of clause 16, further comprising dynamically setting the acceptable range of data values based on a result of the correlating. 20. The method of clause 16, further comprising automatically determining the one of the plurality of sensors for detecting the data value outside of the acceptable range based on a result of the correlating.

Back calculation, such as for determining possible root causes of failures and the like, may benefit from a graphical approach that facilitates visualizing an industrial environment, machine, or portion thereof marked with indications of information sources that may provide data such as sensors and the like related to the failure. A failed part, such as a bearing, may be associated with other parts, such as shaft, motor, and the like. Sensors for monitoring conditions of the bearing and the associated parts may provide information that could indicate a potential source of failure. Such information may also be useful to suggest indicators, such as changes in sensor output, to monitor or avoid the failure in the future. A system that facilitates a graphical approach for back-calculation may interact with sensor data collection and analysis systems to at least partially automate aspects related to data collection and processing determined from a back-calculation process.

In embodiments, a system for data collection in an industrial environment may include a user interface in which portions of an industrial machine associated with a condition of interest, such as a failure condition, are presented on an electronic display along with sensor data types contributing to the condition of interest, data collection points (e.g., sensors) associated with the machine portions that monitor the data types, a set of data from the data collection points that was collected and used to determine the condition of interest, and an annotation of sensors that delivered exceptional data, such as data that is out of an acceptable range, and the like, that may have been used to determine the condition of interest. The user interface may access a description of the machine that facilitates determining and visualizing related components, such as bearing, shafts, brakes, rotors, motor housings, and the like that contribute to a function, such as rotating a turbine. The user interface may also access a data set that relates sensors disposed in and about the machine with the components. Information in the data set may include descriptions of the sensors, their function, a condition that each senses, typical or acceptable ranges of values output from the sensors, and the like. The information in the data set may also identify a plurality of potential pathways in a system for data collection in an industrial environment for sensor data to be delivered to a data collector. The user interface may also access a data set that may include data collection templates used to configure a data collection system for collecting data from the sensors to meet specific purposes (e.g., to collect data from groups of sensors into a sensor data set suitable for determining a condition of the machine, such as a degree of slippage of the shaft relative to the motor, and the like).

In embodiments, a method of back-calculation for determining candidate sources of data collection for data that contributes to a condition of an industrial machine may include following routes of data collection determined from a configuration and operational template of a data collection system for collecting data from sensors deployed in the industrial machine that was in place when the contributing data was collected. A configuration and operational template may describe signal path switching, multiplexing, collection timing, and the like for data from a group of sensors. The group of sensors may be local to a component, such as a bearing, or more regionally distributed, such as sensors that capture information about the bearing and its related components. In embodiments, a data collection template may be configured for collecting and processing data to detect a particular condition of the industrial machine. Therefore, templates may be correlated to conditions so that performing back-calculation of a condition of interest can be guided by the correlated template. Data collected based on the template may be examined and compared to acceptable ranges of data for various sensors. Data that is outside of an acceptable range may indicate potential root causes of an unacceptable condition. In embodiments, a suspect source of data collection may be determined from the candidate sources of data collection based on a comparison of data collected from the candidate data sources with an acceptable range of data collected from each candidate data source. Visualizing these back-calculation based signal paths, candidate sensors, and suspect data sources provides a user with valuable insights into possible root causes of failures and the like.

In embodiments, a method for back-calculation may include visualizing route(s) of data that contribute to a fault condition detected in an industrial environment by applying back-calculation to determine sources of the contributed data with the visualizing appearing as highlighted data paths in a visual representation of the data collection system in the industrial machine. In embodiments, determining sources of data may be based on a data collection and processing template for the fault condition. The template may include a configuration of a data collection system when data from the determined sources was collected with the system.

When failures occur, or conditions of a portion of a machine in an industrial environment reach a critical point prior to failure, such as may be detected during preventive maintenance and the like, back-calculation may be useful in determining information to gather that might help avoid the failure and/or improve system performance - for example, by avoiding substantive degradation in component operation. Visualizing data collection sources, components related to a condition, algorithms that may determine the potential onset of the condition and the like may facilitate preparation of data collection templates for configuring data sensing, routing, and collection resources in a system for data collection in an industrial environment. In embodiments, configuring a data collection template for a system for collecting data in an industrial environment may be based on back-calculations applied to machine failures that identify candidate conditions to monitor for avoiding the machine failures. The resulting template may identify sensors to monitor, sensor data collection path configuration, frequency, and amount of data to collect, acceptable levels of sensor data, and the like. With access to information about the machine, such as which parts closely relate to others and sensors that collected data from parts in the machine, a data collection system configuration template may be automatically generated when a target component is identified.

In embodiments, a user interface may include a graphical display of data sources as a logical arrangement of sensors that may contribute data to a calculation of a condition of a machine in an industrial environment. A logical arrangement may be based on sensor type, data collection template, condition, algorithm for determining a condition, and the like. In an example, a user may wish to view all temperature sensors that may contribute to a condition, such as a failure of a part in an industrial environment. A user interface may communicate with a database of machine related information, such as parts that relate to a condition, sensors for those parts, and types of those sensors to determine the subset of sensors that measure temperature. The user interface may highlight those sensors. The user interface may activate selectable graphical elements for those sensors that, when selected by the user, may present data associated with those sensors, such as sensor type, ranges of data collected, acceptable ranges, actual data values collected for a given condition, and the like, such as in a pop-up panel or the like. Similar functionality of the user interface may apply to physical arrangements of sensors, such as all sensors associated with a motor, boring machine cutting head, wind turbine, and the like.

In embodiments, third-parties, such as component manufacturers, remote maintenance organizations and the like may benefit from access to back-calculation visualization. Permitting third parties to have access to back-calculation information, such as sensors that contributed unacceptable data values to a calculation of a condition, visualization of sensor positioning, and the like may be an option that a user can exercise in a user interface for a graphical approach to back-calculations as described herein. A list of manufacturers of machines, sub-systems, individual components, sensors, data collection systems, and the like may be presented along with remote maintenance organizations, and the like in a portion of a user interface. A user of the interface may select one or more of these third-parties to grant access to at least a portion of the available data and visualizations. Selecting one or more of these third-parties may also present statistical information about the party, such occurrences and frequency of access to data to which the party is granted access, request from the party for access, and the like.

In embodiments, visualization of back-calculation analysis may be combined with machine learning so that back-calculations and their visualizations may be used to learn potential new diagnoses for conditions, such as failure conditions, to learn new conditions to monitor, and the like. A user may interact with the user interface to provide the machine learning techniques feedback to improve results, such as indicating a success or failure of an attempt to prevent failures through specific data collection and processing solutions (e.g., templates), and the like.

In embodiments, methods and systems of back-calculation of data collected with a system for data collection in an industrial environment may be applied to concrete pouring equipment in a construction site application. Concrete pouring equipment may comprise several active components including mixers that may include water and aggregate supply systems, mixing control systems, mixing motors, directional controllers, concrete sensors and the like, concrete pumps, delivery systems, flow control as well as on/off controls, and the like. Back-calculation of failure or other conditions of active or passive components of a concrete pouring equipment may benefit from visualization of the equipment, its components, sensors, and other points where data is collected (e.g., controllers and the like). Visualizing data/-conditions collected from sensors associated with concrete pumps and the like when performing back-calculation of a flow rate failure condition may inform the user of a conditions of the pump that may contribute to the flow rate failure. Flow rate may decrease contemporaneously with an increase in temperature of the pump. This may be visualized by, for example, presenting the flow rate sensor data and the pump temperature sensor data in the user interface. This correlation may be noted by an expert system or by a user observing the visualization and corrective action may be taken.

In embodiments, methods and systems of back-calculation of data collected with a system for data collection in an industrial environment may be applied to digging and extraction systems in a mining application. Digging and extraction systems may comprise several active sub-systems including cutting heads, pneumatic drills, jack hammers, excavators, transport systems, and the like. Back-calculation of failure or other conditions of active or passive components of digging and extraction systems may benefit from visualization of the equipment, its components, sensors, and other points where data is collected (e.g., controllers and the like). Visualizing data/conditions collected from sensors associated with pneumatic drills and the like when performing back-calculation of a pneumatic line failure condition may inform the user of a conditions of the drill that may contribute to the line failure. Line pressure may increase contemporaneously with a change of a condition of the drill. This may be visualized by, for example, presenting the line pressure sensor data and data from sensors associated with the drill in the user interface. This correlation may be noted by an expert system or by a user observing the visualization and corrective action may be taken.

In embodiments, methods and systems of back-calculation of data collected with a system for data collection in an industrial environment may be applied to cooling towers in an oil and gas production environment. Cooling towers may comprise several active components including feedwater systems, pumps, valves, temperature-controlled operation, storage systems, mixing systems, and the like. Back-calculation of failure or other conditions of active or passive components of cooling towers may benefit from visualization of the equipment, its components, sensors and other points where data is collected (e.g., controllers and the like). Visualizing data/conditions collected from sensors associated with the cooling towers and the like when performing back-calculation of a circulation pump failure condition may inform the user of a conditions of the cooling towers that may contribute to the pump failure. Temperature of the feedwater may increase contemporaneously with a decrease in output of the circulation pump. This may be visualized by, for example, presenting the feed water temperature sensor data and the pump output rate sensor data in the user interface. This correlation may be noted by an expert system or by a user observing the visualization and corrective action may be taken.

In embodiments, methods and systems of back-calculation of data collected with a system for data collection in an industrial environment may be applied to circulation water systems in a power generation application. Circulation water systems may comprise several active components including, pumps, storage systems, water coolers, and the like. Back-calculation of failure or other conditions of active or passive components of circulation water systems may benefit from visualization of the equipment, its components, sensors and other points where data is collected (e.g., controllers and the like). Visualizing data/conditions collected from sensors associated with water coolers and the like when performing back-calculation of a circulation water temperature failure condition may inform the user of a conditions of the cooler that may contribute to the temperature condition failure. Circulation temperature may increase contemporaneously with an increase of core water cooler temperature. This may be visualized by, for example, presenting the circulation water temperature sensor data and the water cooler temperature sensor data in the user interface. This correlation may be noted by an expert system or by a user observing the visualization and corrective action may be taken.

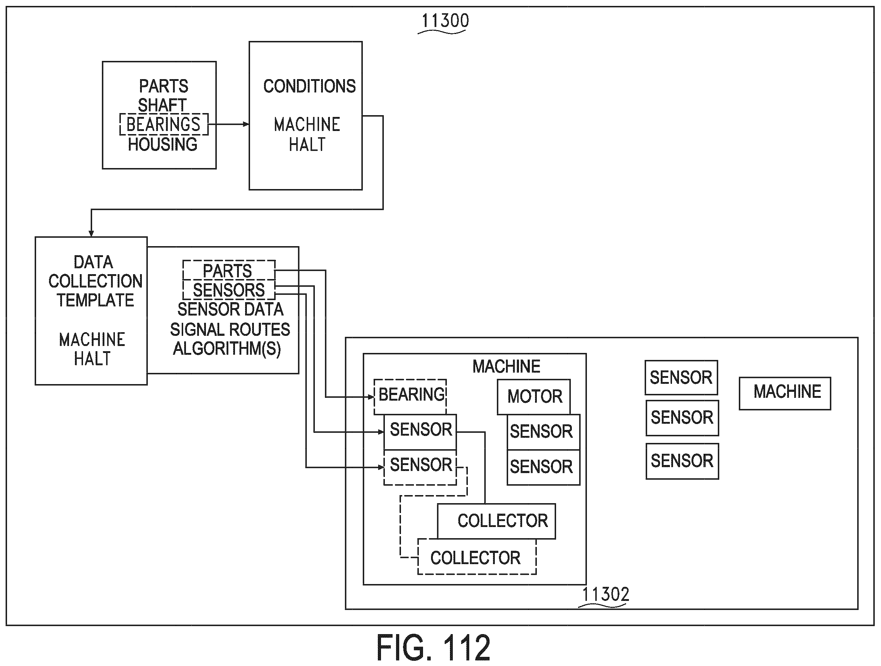

Referring to Figure 112 a graphical approach 11300 for back-calculation is depicted. Components of an industrial environment may be depicted in a map of the environment 11302. Components that may have a history of failure (with this installation or others) may be highlighted. In response to a selection of one of these components (such as by a user making the selection), related components and sensors for the selected part and related components may be highlighted, including signal routing paths for the data from their relevant sensors to a data collector. Additional highlighting may be added to sensors from which unacceptable data has been collected, thereby indicating potential root causes of a failure of the selected part. The relationships among the parts may be based at least in part on machine configuration metadata. The relationship between specific sensors and the failure condition may be based at least in part on a data collection template associated with the part and/or associated with the failure condition.

Clause 1. In embodiments, a system comprising: a user interface of a system adapted to collect data in an industrial environment; the user interface comprising: a plurality of graphical elements representing mechanical portions of an industrial machine, wherein the plurality of graphical elements is associated with a condition of interest generated by a processor executing a data analysis algorithm; a plurality of graphical elements representing data collectors in a system adapted for collecting data in an industrial environment that collected data used in the data analysis algorithm; and a plurality of graphical elements representing sensors used to capture the data used in the data analysis algorithm, wherein graphical elements for sensors that provided data that was outside of an acceptable range of data values are indicated through a visual highlight in the user interface. 2. The system of clause 1, wherein the condition of interest is selected from a list of conditions of interest presented in the user interface. 3. The system of clause 1, wherein the condition of interest is a mechanical failure of at least one of the mechanical portions of the industrial machine. 4. The system of clause 1, wherein the mechanical portions comprise at least one of a bearing, shaft, rotor, housing, and linkage of the industrial machine. 5. The system of clause 1, wherein the acceptable range of data values is available for each sensor. 6. The system of clause 1, further comprising highlighting data collectors that collected the data that was outside of the acceptable range of data values. 7. The system of clause 1, further comprising a data collection system configuration template that facilitates configuring the data collection system to collect the data for calculating the condition of interest. 8. A method of determining candidate sources of a condition of interest comprising: identifying a data collection template for configuring data routing and collection resources in a system adapted to collect data in an industrial environment, wherein the template was used to collect data that contributed to a calculation of the condition of interest; determining paths from data collectors for the collected data to sensors that produced the collected data by analyzing the data collection template; comparing data collected by the sensors with acceptable ranges of data values for data collected by the sensors; and highlighting, in an electronic user interface that depicts the industrial environment and at least one of the sensors, at least one sensor that produced data that contributed to the calculation of the condition of interest that is outside of the acceptable range of data for that sensor. 9. The method of clause 8, wherein the condition of interest is a failure condition. 10. The method of clause 8, wherein the data collection template comprises configuration information for at least one of an analog crosspoint switch, a multiplexer, a hierarchical multiplexer, a sensor, a collector, and a data storage facility of the system adapted to collect data in the industrial environment. 11. The method of clause 8, wherein the highlighting in the industrial environment comprises highlighting he at least one sensor, and at least one route of data from the sensor to a data collector of the system for data collection in the industrial environment. 12. The method of clause 8, wherein comparing data collected by the sensors with acceptable ranges of data values comprises comparing data collected by each sensor with an acceptable range of data values that is specific to each sensor. 13. The method of clause 8, wherein the calculation of the condition of interest comprises calculating a trend of data from at least one sensor. 14. The method of clause 8, wherein the acceptable range of values comprises a trend of data values. 15. A method of visualizing routes of data that contribute to a condition of interest that is detected in an industrial environment, the method comprising: applying back calculation to the condition of interest to determine a data collection system configuration template associated with the condition of interest;

analyzing the template to determine a configuration of the data collection system for collecting data for detecting the condition of interest; presenting, in an electronic user interface, a map of the data collection configured by the template; and highlighting, in the electronic user interface, routes in the data collection system that reflect paths of data from at least one sensor to at least one data collector for data that contributes to calculating the condition of interest. 16. The method of clause 15 wherein the data collection system configuration template comprises configuration information for at least one resource deployed in the data collection system selected from the list consisting of an analog crosspoint switch, a multiplexer, a hierarchical multiplexer, a data collector, and a sensor. 17. The method of clause 15, further comprising generating a target diagnosis for the condition of interest by applying machine learning to the back calculation. 18. The method of clause 15, further comprising highlighting in the electronic user interface, sensors that produce data used in calculating the condition of interest that is outside of an acceptable range of data values for the sensor. 19. The method of clause 15, wherein the condition of interest is selected from a list of conditions of interest presented in the user interface. 20. The system of clause 15, wherein the condition of interest is a mechanical failure of at least one mechanical portion of the industrial environment. 21. The system of clause 15, wherein the mechanical portions comprise at least one of a bearing, shaft, rotor, housing, and linkage of the industrial environment.

In embodiments, a system for data collection in an industrial environment may route data from a plurality of sensors in the industrial environment to wearable haptic stimulators that present the data from the sensors as human detectable stimuli including at least one of tactile, vibration, heat, sound, and force. In embodiments, the haptic stimulus represents an effect on the machine resulting from the sensed data. In embodiments, a bending effect may be presented as bending a finger of a haptic glove. In embodiments, a vibrating effect may be presented as vibrating a haptic arm band. In embodiments, a heating effect may be presented as an increase in temperature of a haptic wrist band. In embodiments, an electrical effect (e.g., over voltage, current, and others) may be presented as a change in sound of a phatic audio system.

In embodiments, an industrial machine operator haptic user interface may be adapted to provide haptic stimuli to the operator that is responsive to the operator's control of the machine, wherein the stimuli indicate an impact on the machine as a result of the operator's control and interaction with objects in the environment as a result thereof. In embodiments, sensed conditions of the machine that exceed an acceptable range may be presented to the operator through the haptic user interface. In embodiments, the sensed conditions of the machine that are within an acceptable range may not be presented to the operator through the haptic user interface. In embodiments, the sensed conditions of the machine that are within an acceptable range may presented as natural language representations of confirmation of the operator control. In embodiments, at least a portion of the haptic user interface is worn by the operator. In embodiments, a wearable haptic user interface device may include force exerting devices along the outer legs of a device operator's uniform. When a vehicle that the operator is controlling approaches an obstacle along a lateral side of the vehicle, an inflatable bellows may be inflated, exerting pressure against the leg of the operator closest to the side of the vehicle approaching the obstacle. The bellows may continue to be inflated, thereby exerting additional pressure on the operator's leg that is consistent with the proximity of the obstacle. The pressure may be pulsed when contact with the obstacle is imminent. In another example, an arm band of an operator may vibrate in coordination with vibration being experienced by a portion of the vehicle that the operator is controlling. These are merely examples and not intended to be limiting or restrictive of the ways in which a wearable haptic feedback user device may be controlled to indicate conditions that are sensed by a system for data collection in an industrial environment.

In embodiments, a haptic user interface safety system worn by a user in an industrial environment may be adapted to indicate proximity to the user of equipment in the environment by stimulating a portion of the user with at least one of pressure, heat, impact, electrical stimuli and the like, the portion of the user being stimulated may be closest to the equipment. In embodiments, at least one of the type, strength, duration, and frequency of the stimuli is indicative of a risk of injury to the user.

In embodiments, a wearable haptic user interface device, that may be worn by a user in an industrial environment, may broadcast its location and related information upon detection of an alert condition in the industrial environment. The alert condition may be proximal to the user wearing the device, or not proximal but related to the user wearing the device. A user may be an emergency responder, so the detection of a situation requiring an emergency responded, the user's haptic device may broadcast the user's location to facilitate rapid access to the user or by the user to the emergency location. In embodiments, an alert condition may be determined from monitoring industrial machine sensors may be presented to the user as haptic stimuli, with the severity of the alert corresponding to a degree of stimuli. In embodiments, the degree of stimuli may be based on the severity of the alert, the corresponding stimuli may continue, be repeated, or escalate, optionally including activating multiple stimuli concurrently, send alerts to additional haptic users, and the like until an acceptable response is detected, e.g., through the haptic UI. The wearable haptic user device may be adapted to communicate with other haptic user devices to facilitate detecting the acceptable response.

In embodiments, a wearable haptic user interface for use in an industrial environment may include gloves, rings, wrist bands, watches, arm bands, head gear, belts, necklaces, shirts (e.g., uniform shirt), foot wear, pants, ear protectors, safety glasses, vests, overalls, coveralls, and any other article of clothing or accessory that can be adapted to provide haptic stimuli.

In embodiments, wearable haptic device stimuli may be correlated to a sensor in an industrial environment. Non-limiting examples include a vibration of a wearable haptic device in response to vibration detected in an industrial environment; increasing or decreasing the temperature of a wearable haptic device in response to a detected temperature in an industrial environment; producing sound that changes in pitch responsively to changes in a sensed electrical signal, and the like. In embodiments, a severity of wearable haptic device stimuli may correlate to an aspect of a sensed condition in the industrial environment. Non-limiting examples include moderate or short-term vibration for a low degree of sensed vibration; strong or long-term vibration stimulation for an increase in sensed vibration; aggressive, pulsed, and/or multi-mode stimulation for a high amount of sensed vibration. Wearable haptic device stimuli may also include lighting (e.g., flashing, color changes, and the like), sound, odor, tactile output, motion of the haptic device (e.g., inflating/deflating a balloon, extension/retraction of an articulated segment, and the like), force/impact, and the like.

In embodiments, a system for data collection in an industrial environment may interface with wearable haptic feedback user devices to relay data collected from fuel handling systems in a power generation application to the user via haptic stimulation. Fuel handling for power generation may include solid fuels, such as woodchips, stumps, forest residue, sticks, energy willow, peat, pellets, bark, straw, agro biomass, coal, and solid recovery fuel. Handling systems may include receiving stations that may also sample the fuel, preparation stations that may crush or chip wood-based fuel or shred waste-based fuel. Fuel handling systems may include storage and conveying systems, feed and ash removal systems and the like. Wearable haptic user interface devices may be used with fuel handling systems by providing an operator feedback on conditions in the handling environment that the user is otherwise isolated from. Sensors may detect operational aspects of a solid fuel feed screw system. Conditions like screw rotational rate, weight of the fuel, type of fuel, and the like may be converted into haptic stimuli to a user while allowing the user to use his hands and provide his attention to operate the fuel feed system.

In embodiments, a system for data collection in an industrial environment may interface with wearable haptic feedback user devices to relay data collected from suspension systems of a truck and/or vehicle application to the user via haptic stimulation. Haptic simulation may be correlated with conditions being sensed by the vehicle suspension system. In embodiments, road roughness may be detected and converted into vibration-like stimuli of a wearable haptic arm band. In embodiments, suspension forces (contraction and rebound) may be converted into stimuli that present a scaled down version of the forces to the user through a wearable haptic vest.

In embodiments, a system for data collection in an industrial environment may interface with wearable haptic feedback user devices to relay data collected from hydroponic systems in an agriculture application to the user via haptic stimulation. In embodiments, sensors in hydroponic systems, such as temperature, humidity, water level, plant size, carbon dioxide / oxygen levels, and the like may be converted to wearable device haptic stimuli. As an operator wearing haptic feedback clothing walks through a hydroponic agriculture facility, sensors proximal to the operator may signal to the haptic feedback clothing relevant information, such as temperature or a measure of actual temperature versus desired temperature that the haptic clothing may convert into haptic stimuli. In an example, a wrist band may include a thermal stimulator that can change temperature quickly to track temperature data or a derivative thereof from sensors in the agriculture environment. As a user walks through the facility, the haptic feedback wristband may change temperature to indicate a degree to which proximal temperatures are complying with expected temperatures.

In embodiments, a system for data collection in an industrial environment may interface with wearable haptic feedback user devices to relay data collected from robotic positioning systems in an automated production line application to the user via haptic stimulation. Haptic feedback may include receiving a positioning system indicator of accuracy and converting it to an audible signal when the accuracy is acceptable, and another type of stimuli when the accuracy is not acceptable.

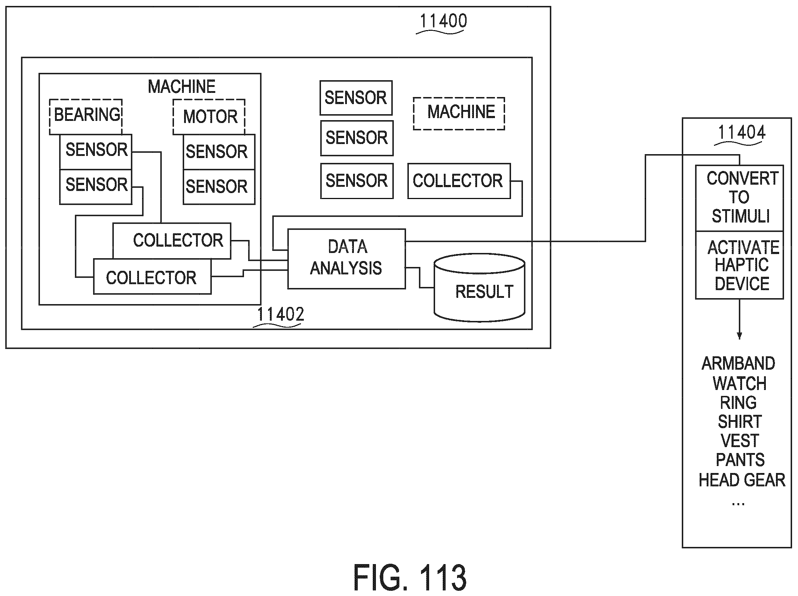

Referring to Figure 113, a wearable haptic user interface device for providing haptic stimuli to a user that is responsive to data collected in an industrial environment by a system adapted to collect data in the industrial environment is depicted. A system for data collection 11402 in an industrial environment 11400 may include a plurality of sensors. Data from those sensors may be collected and analyzed by a computing system. A result of the analysis may be communicated wirelessly to one or more wearable haptic feedback stimulators 11404 worn by a user associated with the industrial environment. The wearable haptic feedback stimulators may interpret the result, convert it into a form of stimuli based on a haptic stimuli-to-sensed condition mapping, and produce the stimuli.

Clause 1. In embodiments, a system for data collection in an industrial environment, comprising: a plurality of wearable haptic stimulators that produce stimuli selected from the list of stimuli consisting of tactile, vibration, heat, sound, force, odor, and motion; a plurality of sensors deployed in the industrial environment to sense conditions in the environment; a processor logically disposed between the plurality of sensors and the wearable haptic stimulators, the processor receiving data from the sensors representative of the sensed condition, determining at least one haptic stimulation that corresponds to the received data, and sending at least one signal for instructing the wearable haptic stimulators to produce the at least one stimulation. 2. The system of clause 1, wherein the haptic stimulation represents an effect on a machine in the industrial environment resulting from the condition. 3. The system of clause 2, wherein a bending effect is presented as bending a haptic device. 4. The system of clause 2, wherein a vibrating effect is presented as vibrating a haptic device. 5. The system of clause 2, wherein a heating effect is presented as an increase in temperature of a haptic device. 6. The system of clause 2, wherein an electrical effect is presented as a change in sound produced by a haptic device. 7. The system of clause 2, wherein at least one of the plurality of wearable haptic stimulators are selected from the list consisting of a glove, ring, wrist band, wrist watch, arm band, head gear, belt, necklace, shirt, foot wear, pants, overalls, coveralls, and safety goggles. 8. The system of clause 2, wherein the at least one signal comprises an alert of a condition of interest in the industrial environment. 9. The system of clause 8, wherein the at least one stimulation produced in response to the alert signal is repeated by at least one of the plurality of wearable haptic stimulators until an acceptable response is detected. 10. An industrial machine operator haptic user interface that is adapted to provide the operator haptic stimuli responsive to the operator's control of the machine based on at least one sensed condition of the machine that indicates an impact on the machine as a result of the operator's control and interaction with objects in the environment as a result thereof. 11. The user interface of clause 10, wherein a sensed condition of the machine that exceeds an acceptable range of data values for the condition is presented to the operator through the haptic user interface. 12. The user interface of clause 10, wherein a sensed condition of the machine that is within an acceptable range of data values for the condition is presented as natural language representations of confirmation of the operator control via an audio haptic stimulator. 13. The user interface of clause 10, wherein at least a portion of the haptic user interface is worn by the operator. 14. The system of clause 10, wherein a vibrating sensed condition is presented as vibrating stimulation by the haptic user interface. 15. The system of clause 10, wherein a temperature-based sensed condition is presented as heat stimulation by the haptic user interface. 16. A haptic user interface safety system worn by a user in an industrial environment, wherein the interface is adapted to indicate proximity to the user of equipment in the environment by haptic stimulation via a portion of the haptic user interface that is closest to the equipment, wherein at least one of the type, strength, duration, and frequency of the stimulation is indicative of a risk of injury to the user. 17. The haptic user interface of clause 16, wherein the haptic stimulation is selected from a list consisting of pressure, heat, impact, and electrical stimulation. 18. The haptic user interface of clause 16 wherein the haptic user interface further comprises a wireless transmitter that broadcasts a location of the user. 19. The haptic user interface of clause 18, wherein the wireless transmitter broadcasts a location of the user in response to indicating proximity of the user to the equipment. 20. The haptic user interface of clause 16, wherein the proximity to the user of equipment in the environment is based on sensor data provided to the haptic user interface from a system adapted to collect data in an industrial environment, wherein the system is adapted based on a data collection template associated with a user safety condition in the industrial environment.

In embodiments, a system for data collection in an industrial environment may facilitate presenting a graphical element indicative of industrial machine sensed data on an augmented reality (AR) display. The graphical element may be adapted to represent a position of the sensed data on a scale of acceptable values of the sensed data. The graphical element may be positioned proximal to a sensor detected in the field of view being augmented that captured the sensed data in the AR display. The graphical element may be a color and the scale may be a color scale ranging from cool colors (e.g., greens, blues) to hot colors (e.g., yellow, red) and the like. Cool colors may represent data values closer to the midpoint of the acceptable range and the hot colors representing data values close to or outside of a maximum or minimum value of the range.

In embodiments, a system for data collection in an industrial environment may present, in an AR display, data being collected from a plurality of sensors in the industrial environment as one of a plurality graphical effects (e.g., colors in a range of colors) that correlate the data being collected from each sensor to a scale of values within an acceptable range compared to values outside of the acceptable range. In embodiments, the plurality of graphical effects may overlay a view of the industrial environment and placement of the plurality of graphical effects may correspond to locations in the view of the environment at which a sensor is located that is producing the corresponding sensor data. In embodiments, a first set of graphical effects (e.g., hot colors) represent components for which multiple sensors indicate values outside acceptable ranges.

In embodiments, a system for data collection in an industrial environment may facilitate presenting, in an AR display information being collected by sensors in the industrial environment as a heat map overlaying a visualization of the environment so that regions of the environment with sensor data suggestive of a greater potential of failure are overlaid with a graphic effect that is different than regions of the environment with sensor data suggestive of a lesser potential of failure. In embodiments, the heat map is based on data currently being sensed. In embodiments, the heat map is based on data from prior failures. In embodiments, the heat map is based on changes in data from an earlier period, such as data that suggest an increased likelihood of machine failure. In embodiments, the heat map is based on a preventive maintenance plan and a record of preventive maintenance in the industrial environment.

In embodiments, a system for data collection in an industrial environment may facilitate presenting information being collected by sensors in the industrial environment as a heat map overlaying a view of the environment, such as a live view as may be presented in an AR display. Such a system may include presenting an overlay that facilitates a call to action, wherein the overlay is associated with a region of the heat map. The overlay may comprise a visual effect of a part or subsystem of the environment on which the action is to be performed. In embodiments, the action to be performed is maintenance related and may be part-specific.

In embodiments, a system for data collection in an industrial environment may facilitate updating, in an AR view of a portion of the environment, a heat map of aspects of the industrial environment based on a change to operating instructions for at least one aspect of a machine in the industrial environment. The heat map may represent compliance with operational limits for portions of machines in the industrial environment. In embodiments, the heat map may represent a likelihood of component failure as a result of the change to operation instructions.

In embodiments, a system for data collection in an industrial environment may facilitate presenting, as a heat map in an AR view of a portion of the environment, a degree or measure of coverage of sensors in the industrial environment for a data collection template that identifies select sensors in the industrial environment for a data collection activity.

In embodiments, a system for data collection in an industrial environment may facilitate displaying a heat map overlaying a view, such as a live view, of an industrial environment of failure-related data for various portions of the environment. The failure-related data may comprise a difference between an actual failure rate of the various portions and another failure rate. Another failure rate may be a rate of failure of comparable portions elsewhere in the environment, and/or average failure rate of comparable portions across a plurality of environments, such as an industry average, manufacturer failure rate estimate, and the like.

In embodiments, a system for data collection in an industrial environment may facilitate displaying a heat map related to data collected from robotic arms and hands for production line robotic handling in an augmented reality view of a portion of the environment. A heat map related to data collected from robotic arms and hands may represent data from sensors disposed in - for example, the fingers of a robotic hand. Sensor may collect data, such as applied pressure when pinching an object, resistance (e.g., responsive to a robotic touch) of an object, multi-axis forces presented to the finger as it performs an operation, such as holding a tool and the like, temperature of the object, total movement of the finger from initial point of contact until a resistance threshold is met, and other hand position / use conditions. Heat maps of this data may be presented in an augmented reality view of a robotic production environment so that a user may make a visual assessment of, for example, how the relative positioning of the robotic fingers impacts the object being handled.

In embodiments, a system for data collection in an industrial environment may facilitate displaying a heat map related to data collected from linear bearings for production line robotic handling in an augmented reality view of a portion of the environment. Linear bearings, as with most bearings, may not be visible while in use. However, assessing their operation may benefit from representing data from sensors that capture information about the bearings while in use in an augmented reality display. In embodiments, sensors may be placed to detect forces being placed on portions of the bearings by the rotating member or elements that the bearings support. These forces may be presented as heat maps that correspond to relative forces, on a visualization of the bearings in an augmented reality view of a robot handling machine that uses linear bearings.

In embodiments, a system for data collection in an industrial environment may facilitate displaying a heat map related to data collected from boring machinery for mining in an augmented reality view of a portion of the environment. Boring machinery, and in particular multi-tip circular boring heads may experience a range of rock formations at the same time. Sensors may be placed proximal to each boring tip that may detect forces experienced by the tips. The data may be collected by a system adapted to collect data in an industrial environment and provided to an augmented reality system that may display the data as heat maps or the like in a view of the boring machine.

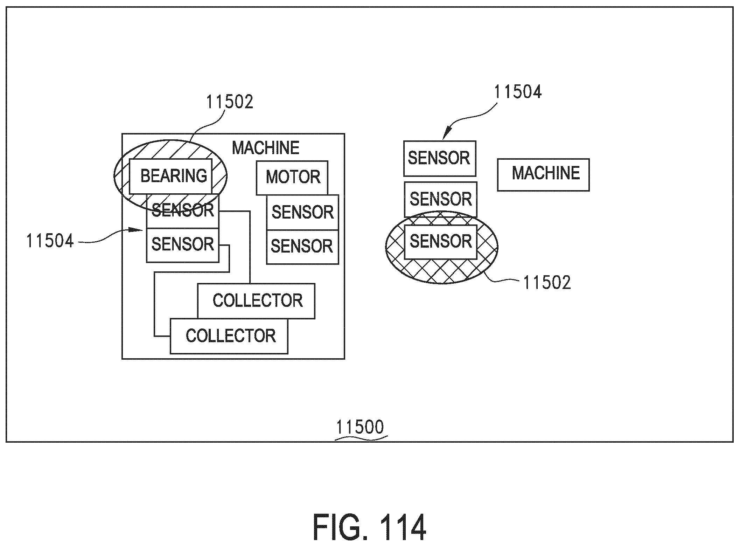

Referring to Figure 114, an augmented reality display of heat maps based on data collected in an industrial environment by a system adapted to collect data in the environment is depicted. An augmented reality view of an industrial environment 11500 may include heat maps 11502 that depict data received from or derived from data received from sensors 11504 in the industrial environment. Sensor data may be captured and processed by a system adapted for data collection and analysis in an industrial environment. The data may be converted into a form that is suitable for use in an augmented reality system for displaying heat maps. The heat maps 11502 may be aligned in the augmented reality view with a sensor from which the underlying data was sourced.

Clause 1. In embodiments, an augmented reality (AR) system in which industrial machine sensed data is presented in a view of the industrial machine as heat maps of data collected from sensors in the view, wherein the heat maps are positioned proximal to a sensor capturing the sensed data that is visible in the AR display. 2. The system of clause 1, wherein the heat maps are based on a comparison of real time data collected from sensors with an acceptable range of values for the data. 3. The system of clause 1, wherein the heat maps are based on trends of sensed data. 4. The system of clause 1, wherein the heat maps represent a measure of coverage of sensors in the industrial environment in response to a condition of interest that is calculated from data collected by sensors in the industrial environment. 5. The system of clause 1, wherein the heat maps of data collected from sensors in the view is based on data collected by a system adapted to collect data in the industrial environment by routing data from a plurality of sensors to a plurality of data collectors via at least one of an analog crosspoint switch, a multiplexer, and a hierarchical multiplexer. 6. The system of clause 1, wherein the heat maps present different collected data values as different colors. 7. The system of clause 1, wherein data collected from a plurality of sensors is combined to produce a heat map. 8. A system for data collection in an industrial environment, comprising: an augmented reality display that presents data being collected from a plurality of sensors in the industrial environment as one of a plurality of colors, wherein the colors correlate the data being collected from each sensor to a color scale with cool colors mapping to values of the data within an acceptable range and hot colors mapping to values of the data outside of the acceptable range, wherein the plurality of colors overlay a view of the industrial environment and placement of the plurality of colors corresponds to locations in the view of the environment at which a sensor is located that is producing the corresponding sensor data. 9. The system of clause 8, wherein hot colors represent components for which multiple sensors indicate values outside typical ranges. 10. The system of clause 8, wherein the plurality of colors is based on a comparison of real time data collected from sensors with an acceptable range of values for the data. 11. The system of clause 8, wherein the plurality of colors is based on trends of sensed data. 12. The system of clause 8, wherein the plurality of colors represents a measure of coverage of sensors in the industrial environment in response to a condition of interest that is calculated from data collected by sensors in the industrial environment. 13. A method comprising, presenting information being collected by sensors in an industrial environment as a heat map overlaying a view of the environment so that regions of the environment with sensor data suggestive of a greater potential of failure are overlaid with a heat map that is different than regions of the environment with sensor data suggestive of a lesser potential of failure. 14. The method of clause 13, wherein the heat map is based on data currently being sensed. 15. The method of clause 13, wherein the heat map is based on data from prior failure data. 16. The method of clause 13, wherein the heat map is based on changes in data from an earlier period that suggest an increased likelihood of machine failure. 17. The method of clause 13, wherein the heat map is based on a preventive maintenance plan and a record of preventive maintenance in the industrial environment. 18. The method of clause 13, wherein the heat map represents an actual failure rate versus a reference failure rate. 19. The method of clause 18, wherein the reference failure rate is an industry average failure rate. 20. The method of clause 18, wherein the reference failure rate is a manufacturer's failure rate estimate.

In embodiments, a system for data collection and visualization thereof in an industrial environment may include an augmented reality and/or virtual reality (AR/VR) display in which data values output by sensors disposed in a field of view in the AR/VR display are displayed with visual attributes that indicate a degree of compliance of the data to an acceptable range or values for the sensed data. In embodiments, the visual attributes may provide near real-time portrayal of trends of the sensed data and/or of derivatives thereof. In embodiments, the visual attributes may be the actual data being captured, or the derived data, such as a trend of the data and the like.

In embodiments, a system for data collection and visualization thereof in an industrial environment may include an AR/VR display in which trends of data values output by sensors disposed in a field of view in the AR/VR are displayed with visual attributes that indicate a degree of severity of the trend. In embodiments, other data or analysis that could be displayed may include: data from sensors that exceed an acceptable range, data from sensors that are part of a smart band selected by the user, data from sensors that are monitored for triggering a smart band collection action, data from sensors that sense an aspect of the environment that meets preventive maintenance criteria, such as a PM action is upcoming soon, a PM action was recently performed or is overdue for PM. Other data for such AR/VR visualization may include data from sensors for which an acceptable range has recently been changed, expanded, narrowed and the like. Other data for such AR/VR visualization that may be particularly useful for an operator of an industrial machine (digging, drilling, and the like) may include analysis of data from sensors, such as for example impact on an operating element (torque, force, strain, and the like).

In embodiments, a system for data collection and visualization thereof in an industrial environment that may include presentation of visual attributes that represent collected data in an AR/VR environment may do so for pumps in a mining application. Mining application pumps may provide water and remove liquefied waste from a mining site. Pump performance may be monitored by sensors detecting pump motors, regulators, flow meters, and the like. Pump performance monitoring data may be collected and presented as a set of visual attributes in an augmented reality display. In an example, pump motor power consumption, efficiency, and the like may be displayed proximal to a pump viewed through an augmented reality display.

In embodiments, a system for data collection and visualization thereof in an industrial environment that may include presentation of visual attributes that represent collected data in an AR/VR environment may do so for energy storage in a power generation application. Power generation energy storage may be monitored with sensors that capture data related to storage and use of stored energy. Information such as utilization of individual energy storage cells, energy storage rate (e.g., battery charging and the like), stored energy consumption rate (e.g., KWH being supplied by an energy storage system), storage cell status, and the like may be captured and converted into augmented reality viewable attributes that may be presented in an augmented reality view of an energy storage system.

In embodiments, a system for data collection and visualization thereof in an industrial environment that may include presentation of visual attributes that represent collected data in an AR/VR environment may do so for feed water systems in a power generation application. Sensors may be disposed in an industrial environment, such as power generation for collecting data about feed water systems. Data from those sensors may be captured and processed by the system for data collection. Results of this processing may include trends of the data, such as feed water cooling rates, flow rates, pressure and the like. These trends may be presented on an augmented reality view of a feed water system by applying a map of sensors with physical elements visible in the view and then retrieving data from the mapped sensors. The retrieved data (and derivatives thereof) may be presented in the augmented reality view of the feed water system.

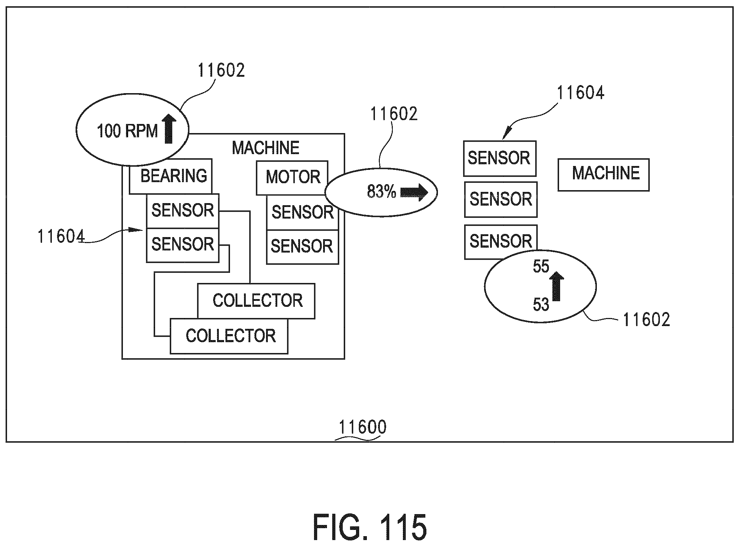

Referring to Figure 115, an augmented reality display 11600 comprising real time data 11602 overlaying a view of an industrial environment is depicted. Sensors 11604 in the environment may be recognized by the augmented reality system, such as by first detecting an industrial machine, system, or part thereof with which the sensors are associated. Data from the sensors 11604 may be retrieved from a data repository, processed into trends, and presented in the augmented reality view 11600 proximal to the sensors from which the data originates

Clause 1 In embodiments, a system for data collection and visualization thereof in an industrial environment in which data values output by sensors disposed in a field of view in an electronic display are displayed in the electronic display with visual attributes that indicate a degree of compliance of the data to an acceptable range or values for the sensed data. 2. The system of clause 1, wherein the view in the electronic display is a view in an augmented reality display of the industrial environment. 3. The system of clause 1, wherein the visual attributes are indicative of a trend of the sensed data over time relative to the acceptable range. 4. The system of clause 1, wherein the data values are disposed in the electronic display proximal to the sensors from which the data values are output. 5. The system of clause 1, wherein the visual attributes further comprise an indication of a smart band set of sensors associated with the sensor from which the data values are output. 6. A system for data collection and visualization thereof in an industrial environment in which data values output by select sensors disposed in an augmented reality view of the industrial environment are displayed with visual attributes that indicate a degree of compliance of the data to an acceptable range or values for the sensed data. 7. The system of clause 6, wherein the sensors are selected based on a data collection template that facilitates configuring sensor data routing resources in the system. 8. The system of clause 7, wherein the select sensors are indicated in the template as part of a group of smart band sensors. 9. The system of clause 7, wherein the select sensors are sensors that are monitored for triggering a smart band data collection action. 10. The system of clause 6, wherein the select sensors are sensors that sense an aspect of the environment associated with preventive maintenance criteria. 11. The system of clause 6, wherein the visual attributes further indicate if the acceptable range has been expanded or narrowed within the past 72 hours. 12. A system for data collection and visualization thereof in an industrial environment in which trends of data values output by select sensors disposed in a field of view of the industrial environment depicted in an augmented reality display are displayed with visual attributes that indicate a degree of severity of the trend. 13. The system of clause 12, wherein sensors are selected when data from the sensors exceed an acceptable range of values. 14. The system of clause 14, wherein sensors are selected based on the sensors being part of a smart band group of sensors. 15. The system of clause 12, wherein the visual attributes further indicate a compliance of the trend with an acceptable range of data values. 16. The system of clause 12, wherein the system for data collection is adapted to route data from the select sensors to a controller of the augmented reality display based on a data collection template that facilitates configuring routing resources of the system for data collection. 17. The system of clause 12, wherein the sensors are selected in response to the sensor data being configured in a smart band data collection template as an indication for triggering a smart band data collection action. 18. The system of clause 12, wherein the sensors are selected in response to preventive maintenance criteria. 19. The system of clause 18, wherein the preventive maintenance criteria are selected from the list consisting of a preventive maintenance action is scheduled, a preventive maintenance action has been completed in the last 72 hours, a preventive maintenance action is overdue.

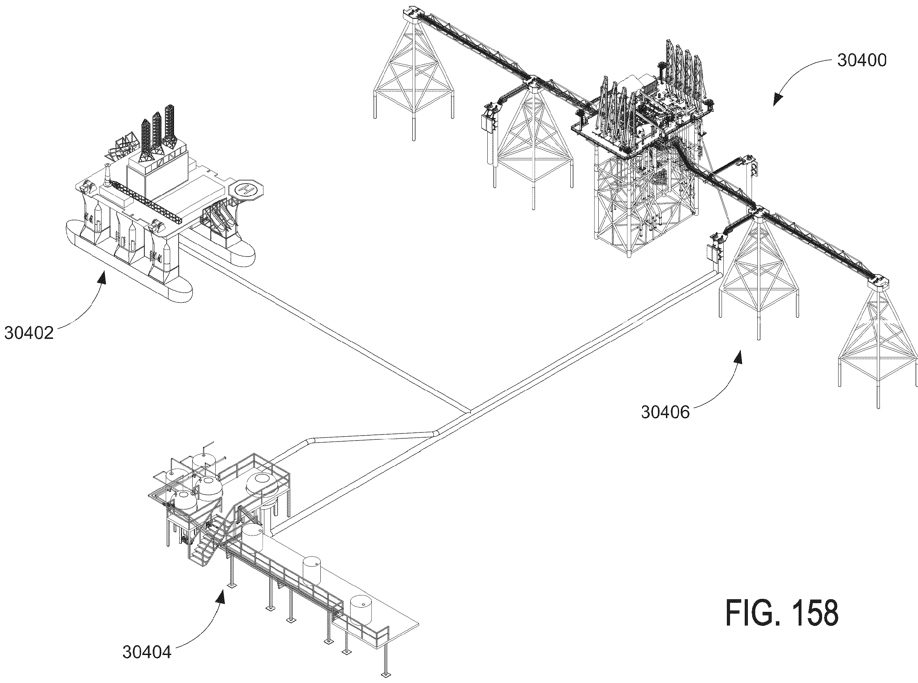

Figure 158 shows a system for data collection in an industrial environment having a self-sufficient data acquisition box for capturing and analyzing data in an industrial environment including sensor inputs 11700, 11702, 11704, 11706 that connect to a data circuit 11708 for analyzing the sensor inputs, a network communication interface 11712, a network control circuit 11710 for sending and receiving information related to the sensor inputs to an external system and a data filter circuit configured to dynamically adjust what portion of the information is sent based on instructions received over the network communication interface. A variety of sensor inputs X connect to the data circuit Y. The data circuit intercommunicates with a network control circuit, which is connected to one or more network interfaces. These interfaces may include wired interfaces or wireless interfaces, communicating via a star, multi-hop, peer-to-peer, hub-and-spoke, mesh, ring, hierarchical, daisy-chained, broadcast, or other networking protocol. These interfaces may be multi-pair as in Ethernet, or single-wire networking protocol such as I2C. The networking protocol may interface one or more of a variety of variants of Ethernet and other protocols for real-time communication in an industrial network, including Modbus® over TCP, Industrial Ethernet, Ethernet Powerlink, Ethernet/IP, EtherCAT, Sercos®, Profinet™, CAN bus, serial protocols, near-field protocols, as well as home automation protocols such as ZigBee®, Z-Wave™, or wireless WWAN or WLAN protocols such as LTE™, Wi-Fi, Bluetooth™, or others. The sensor inputs can be permanently or removably connected to the thing they are measuring, or may be integrated in a standalone data acquisition box. The entire system may be integrated into the apparatus that is being measured, such as a vehicle (e.g., a car, a truck, a commercial vehicle, a tractor, a construction vehicle or other type of vehicle), a component or item of equipment (e.g., a compressor, agitator, motor, fan, turbine, generator, conveyor, lift, robotic assembly, or any other item as described throughout this disclosure), an infrastructure element (such as a foundation, a housing, a wall, a floor, a ceiling, a roof, a doorway, a ramp, a stairway, or the like) or other feature or aspect of an industrial environment. The entire system may be integrated into a stationary industrial system such as a production assembly, static components of an assembly line subject to wear and stress (such as rail guides), or motive elements such as robotics, linear actuators, gearboxes, and vibrators.

Disclosed herein are methods and systems for data collection in an industrial environment featuring self-organization functionality. Such data collection systems and methods may facilitate intelligent, situational, context-aware collection, summarization, storage, processing, transmitting, and/or organization of data, such as by one or more data collectors (such as any of the wide range of data collector embodiments described throughout this disclosure), a central headquarters or computing system, and the like. The described self-organization functionality of data collection in an industrial environment may improve various parameters of such data collection, as well as parameters of the processes, applications, and products that depend on data collection, such as data quality parameters, consistency parameters, efficiency parameters, comprehensiveness parameters, reliability parameters, effectiveness parameters, storage utilization parameters, yield parameters (including financial yield, output yield, and reduction of adverse events), energy consumption parameters, bandwidth utilization parameters, input/output speed parameters, redundancy parameters, security parameters, safety parameters, interference parameters, signal-to-noise parameters, statistical relevancy parameters, and others. The self-organization functionality may optimize across one or more such parameters, such as based on a weighting of the value of the parameters; for example, a swarm of data collectors may be managed (or manage itself) to provide a given level of redundancy for critical data, while not exceeding a specified level of energy usage, e.g., per data collector or a group of data collectors or the entire swarm of data collectors. This may include using a variety of optimization techniques described throughout this disclosure and the documents incorporated herein by reference.

In embodiments, such methods and systems for data collection in an industrial environment can include one or more data collectors, e.g., arranged in a cooperative group or "swarm" of data collectors, that collect and organize data in conjunction with a data pool in communication with a computing system, as well as supporting technology components, services, processes, modules, applications and interfaces, for managing the data collection (collectively referred to in some cases as a data collection system 12004). Examples of such components include, but are not limited to, a model-based expert system, a rule-based expert system, an expert system using artificial intelligence (such as a machine learning system, which may include a neural net expert system, a self-organizing map system, a human-supervised machine learning system, a state determination system, a classification system, or other artificial intelligence system), or various hybrids or combinations of any of the above. References to a self-organizing method or system should be understood to encompass utilization of any one of the foregoing or suitable combinations, except where context indicates otherwise.

The data collection systems and methods of the present disclosure can be utilized with various types of data, including but not limited to vibration data, noise data and other sensor data of the types described throughout this disclosure. Such data collection can be utilized for event detection, state detection, and the like, and such event detection, state detection, and the like can be utilized to self-organize the data collection systems and methods, as further discussed herein. The self-organization functionality may include managing data collector(s), both individually or in groups, where such functionality is directed at supporting an identified application, process, or workflow, such as confirming progress toward or /alignment with one or more objectives, goals, rules, policies, or guidelines. The self-organization functionality may also involve managing a different goal/guideline, or directing data collectors targeted to determining an unknown variable based on collection of other data (such as based on a model of the behavior of a system that involves the variable), selecting preferred sensor inputs among available inputs (including specifying combinations, fusions, or multiplexing of inputs), and/or specifying a specific data collector among available data collectors.

A data collector may include any number of items, such as sensors, input channels, data locations, data streams, data protocols, data extraction techniques, data transformation techniques, data loading techniques, data types, frequency of sampling, placement of sensors, static data points, metadata, fusion of data, multiplexing of data, self-organizing techniques, and the like as described herein. Data collector settings may describe the configuration and makeup of the data collector, such as by specifying the parameters that define the data collector. For example, data collector settings may include one or more frequencies to measure. Frequency data may further include at least one of a group of spectral peaks, a true-peak level, a crest factor derived from a time waveform, and an overall waveform derived from a vibration envelope, as well as other signal characteristics described throughout this disclosure. Data collectors may include sensors measuring or data regarding one or more wavelengths, one or more spectra, and/or one or more types of data from various sensors and metadata. Data collectors may include one or more sensors or types of sensors of a wide range of types, such as described throughout this disclosure and the documents incorporated by reference herein. Indeed, the sensors described herein may be used in any of the methods or systems described throughout this disclosure. For example, one sensor may be an accelerometer, such as one that measures voltage per G of acceleration (e.g., 100 mV/G, 500 mV/G, 1 V/G, 5 V/G, 10 V/G). In embodiments, a data collector may alter the makeup of the subset of the plurality of sensors used in a data collector based on optimizing the responsiveness of the sensor, such as for example choosing an accelerometer better suited for measuring acceleration of a lower speed gear system or drill/boring device versus one better suited for measuring acceleration of a higher speed turbine in a power generation environment. Choosing may be done intelligently, such as for example with a proximity probe and multiple accelerometers disposed on a specific target (e.g., a gear system, drill, or turbine) where while at low speed one accelerometer is used for measuring in the data collector and another is used at high speeds. Accelerometers come in various types, such as piezo-electric crystal, low frequency (e.g., 10 V/G), high speed compressors (10 MV/G), MEMS, and the like. In another example, one sensor may be a proximity probe which can be used for sleeve or tilt-pad bearings (e.g., oil bath), or a velocity probe. In yet another example, one sensor may be a solid state relay (SSR) that is structured to automatically interface with another routed data collector (such as a mobile or portable data collector) to obtain or deliver data. In another example, a data collector may be routed to alter the makeup of the plurality of available sensors, such as by bringing an appropriate accelerometer to a point of sensing, such as on or near a component of a machine. In still another example, one sensor may be a triax probe (e.g., a 100 MV/G triax probe), that in embodiments is used for portable data collection. In some embodiments, of a triax probe, a vertical element on one axis of the probe may have a high frequency response while the ones mounted horizontally may influence limit the frequency response of the whole triax. In another example, one sensor may be a temperature sensor and may include a probe with a temperature sensor built inside, such as to obtain a bearing temperature. In still additional examples, sensors may be ultrasonic, microphone, touch, capacitive, vibration, acoustic, pressure, strain gauges, thermographic (e.g., camera), imaging (e.g., camera, laser, IR, structured light), a field detector, an EMF meter to measure an AC electromagnetic field, a gaussmeter, a motion detector, a chemical detector, a gas detector, a CBRNE detector, a vibration transducer, a magnetometer, positional, location-based, a velocity sensor, a displacement sensor, a tachometer, a flow sensor, a level sensor, a proximity sensor, a pH sensor, a hygrometer / moisture sensor, a densitometric sensor, an anemometer, a viscometer, or any analog industrial sensor and/or digital industrial sensor. In a further example, sensors may be directed at detecting or measuring ambient noise, such as a sound sensor or microphone, an ultrasound sensor, an acoustic wave sensor, and an optical vibration sensor (e.g., using a camera to see oscillations that produce noise). In still another example, one sensor may be a motion detector.

Data collectors may be of or may be configured to encompass one or more frequencies, wavelengths or spectra for particular sensors, for particular groups of sensors, or for combined signals from multiple sensors (such as involving multiplexing or sensor fusion). Data collectors may be of or may be configured to encompass one or more sensors or sensor data (including groups of sensors and combined signals) from one or more pieces of equipment/components, areas of an installation, disparate but interconnected areas of an installation (e.g., a machine assembly line and a boiler room used to power the line), or locations (e.g., a building in one geographic location and a building in a separate, different geographic location). Data collector settings, configurations, instructions, or specifications (collectively referred to herein using any one of those terms) may include where to place a sensor, how frequently to sample a data point or points, the granularity at which a sample is taken (e.g., a number of sampling points per fraction of a second), which sensor of a set of redundant sensors to sample, an average sampling protocol for redundant sensors, and any other aspect that would affect data acquisition.

Within the data collection system 12004, the self-organization functionality can be implemented by a neural net, a model-based system, a rule-based system, a machine learning system, and/or a hybrid of any of those systems. Further, the self-organizing functionality may be performed in whole or in part by individual data collectors, a collection or group of data collectors, a network-based computing system, a local computing system comprising one or more computing devices, a remote computing system comprising one or more computing devices, and a combination of one or more of these components. The self-organization functionality may be optimized for a particular goal or outcome, such as predicting and managing performance, health, or other characteristics of a piece of equipment, a component, or a system of equipment or components. Based on continuous or periodic analysis of sensor data, as patterns/trends are identified, or outliers appear, or a group of sensor readings begin to change, etc., the self-organization functionality may modify the collection of data intelligently, as described herein. This may occur by triggering a rule that reflects a model or understanding of system behavior (e.g., recognizing a shift in operating mode that calls for different sensors as velocity of a shaft increases) or it may occur under control of a neural net (either in combination with a rule-based approach or on its own), where inputs are provided such that the neural net over time learns to select appropriate collection modes based on feedback as to successful outcomes (e.g., successful classification of the state of a system, successful prediction, successful operation relative to a metric). For example only, when an assembly line is reconfigured for a new product or a new assembly line is installed in a manufacturing facility, data from the current data collector(s) may not accurately predict the state or metric of operation of the system, thus, the self-organization functionality may begin to iterate to determine if a new data collector, type of sensed data, format of sensed data, etc. is better at predicting a state or metric. Based on offset system data, such as from a library or other data structure, certain sensors, frequency bands or other data collectors may be used in the system initially and data may be collected to assess performance. As the self-organization functionality iterates, other sensors/frequency bands may be accessed to determine their relative weight in identifying performance metrics. Over time, a new frequency band may be identified (or a new collection of sensors, a new set of configurations for sensors, or the like) as a better or more suitable gauge of performance in the system and the self-organization functionality may modify its data collector(s) based on this iteration. For example only, perhaps an older boring tool in an energy extraction environment dampens one or more vibration frequencies while a different frequency is of higher amplitude and present during optimal performance than what was seen in the present system. In this example, the self-organization functionality may alter the data collectors from what was originally proposed, e.g., by the data collection system, to capture the higher amplitude frequency that is present in the current system.

The self-organization functionality, in embodiments involving a neural net or other machine learning system, may be seeded and may iterate, e.g., based on feedback and operation parameters, such as described herein. Certain feedback may include utilization measures, efficiency measures (e.g., power or energy utilization, use of storage, use of bandwidth, use of input/output use of perishable materials, use of fuel, and/or financial efficiency, financial such as reduction of costs), measures of success in prediction or anticipation of states (e.g., avoidance and mitigation of faults), productivity measures (e.g., workflow), yield measures, and profit measures. Certain parameters may include storage parameters (e.g., data storage, fuel storage, storage of inventory), network parameters (e.g., network bandwidth, input/output speeds, network utilization, network cost, network speed, network availability), transmission parameters (e.g., quality of transmission of data, speed of transmission of data, error rates in transmission, cost of transmission), security parameters (e.g., number and/or type of exposure events, vulnerability to attack, data loss, data breach, access parameters), location and positioning parameters (e.g., location of data collectors, location of workers, location of machines and equipment, location of inventory units, location of parts and materials, location of network access points, location of ingress and egress points, location of landing positions, location of sensor sets, location of network infrastructure, location of power sources) , input selection parameters, data combination parameters (e.g., for multiplexing, extraction, transformation, loading), power parameters (e.g., of individual data collectors, groups of data collectors, or all potentially available data collectors), states (e.g., operational modes, availability states, environmental states, fault modes, health states, maintenance modes, anticipated states), events, and equipment specifications. With respect to states, operating modes may include, mobility modes (direction, speed, acceleration, and the like), type of mobility modes (e.g., rolling, flying, sliding, levitation, hovering, floating), performance modes (e.g., gears, rotational speeds, heat levels, assembly line speeds, voltage levels, frequency levels), output modes, fuel conversion modes, resource consumption modes, and financial performance modes (e.g., yield, profitability). Availability states may refer to anticipating conditions that could cause machine to go offline or require backup. Environmental states may refer to ambient temperature, ambient humidity/moisture, ambient pressure, ambient wind/fluid flow, presence of pollution or contaminants, presence of interfering elements (e.g., electrical noise, vibration), power availability, and power quality, among other parameters. Anticipated states may include achieving or not achieving a desired goal, such as a specified/threshold output production rate, a specified/threshold generation rate, an operational efficiency/failure rate, a financial efficiency/profit goal, a power efficiency/resource utilization, an avoidance of a fault condition (e.g., overheating, slow performance, excessive speed, excessive motion, excessive vibration/oscillation, excessive acceleration, expansion/contraction, electrical failure, running out of stored power/fuel, overpressure, excessive radiation/melt down, fire, freezing, failure of fluid flow (e.g., stuck valves, frozen fluids), mechanical failures (e.g., broken component, worn component, faulty coupling, misalignment, asymmetries/deflection, damaged component (e.g., deflection, strain, stress, cracking), imbalances, collisions, jammed elements, and lost or slipping chain or belt), avoidance of a dangerous condition or catastrophic failure, and availability (online status)).

The self-organization functionality may comprise or be seeded with a model that predicts an outcome or state given a set of data, which may comprise inputs from sensors, such as via a data collector, as well as other data, such as from system components, from external systems and from external data sources. For example, the model may be an operating model for an industrial environment, machine, or workflow. In another example, the model may be for anticipating states, for predicting fault, for optimizing maintenance, for optimizing data transport (such as for optimizing network coding, network-condition-sensitive routing), for optimizing data marketplaces, and the like.

The self-organization functionality may result in any number of downstream actions based on analysis of data from the data collector(s). In an embodiment, the self-organization functionality may determine that the system should either keep or modify operational parameters, equipment or a weighting of a neural net model given a desired goal, such as a specified/threshold output production rate, specified/threshold generation rate, an operational efficiency/failure rate, a financial efficiency/profit goal, a power efficiency/resource utilization, an avoidance of a fault condition, an avoidance of a dangerous condition or catastrophic failure, and the like. In embodiments, the adjustments may be based on determining context of an industrial system, such as understanding a type of equipment, its purpose, its typical operating modes, the functional specifications for the equipment, the relationship of the equipment to other features of the environment (including any other systems that provide input to or take input from the equipment), the presence and role of operators (including humans and automated control systems), and ambient or environmental conditions. For example, in order to achieve a profit goal in a distribution environment (e.g., a power distribution environment), a generator or system of generators may need to operate at a certain efficiency level. The self-organization functionality may be seeded with a model for operation of the system of generators in a manner that results in a specified profit goal, such as indicating an on/off state for individual generator(s) in the power generation system based on the time of day, current market sale price for the fuel consumed by the generators, current demand or anticipated future demand, and the like. As it acquires data and iterates, the model predicts whether the profit goal will be achieved given the current data, and determine whether the data or type of data being collected is appropriate, sufficient, etc. for the model. Based on the results of the iteration, a recommendation may be made (or a control instruction may be automatically provided) to gather different/additional data, organize the data differently, direct different data collectors to collect new data, etc. and/or to operate a subset of the generators at a higher output (but less efficient) rate, power on additional generators, maintain a current operational state, or the like. Further, as the system iterates, one or more additional sensors may be sampled in the model to determine if their addition to the self-organization functionality would improve predicting a state or otherwise assisting with the goals of the data collection efforts.

In embodiments, a system for data collection in an industrial environment may include a plurality of input sensors, such as any of those described herein, communicatively coupled to a data collector having one or more processors. The data collection system may include a plurality of individual data collectors structured to operate together to determine at least one subset of the plurality of sensors from which to process output data. The data collection system may also include a machine learning circuit structured to receive output data from the at least one subset of the plurality of sensors and learn received output data patterns indicative of a state. In some embodiments, the data collection system may alter the at least one subset of the plurality of sensors, or an aspect thereof, based on one or more of the learned received output data patterns and the state. In certain embodiments, the machine learning circuit is seeded with a model that enables it to learn data patterns. The model may be a physical model, an operational model, a system model, and the like. In other embodiments, the machine learning circuit is structured for deep learning wherein input data is fed to the circuit with no or minimal seeding and the machine learning data analysis circuit learns based on output feedback. For example, a metal tooling system in a manufacturing environment may operate to manufacture parts using machine tools such as lathes, milling machines, grinding machines, boring tools, and the like. Such machines may operate at various speeds and output rates, which may affect the longevity, efficiency, accuracy, etc. of the machine. The data collector may acquire various parameters to evaluate the environment of the machine tools, e.g., speed of operation, heat generation, vibration, and conformity with a part specification. The system can utilize such parameters and iterate towards a prediction of state, output rate, etc. based on such feedback. Further, the system may self-organize such that the data collector(s) collect additional/different data from which such predictions may be made.

There may be a balance of multiple goals/guidelines in the self-organization functionality of data collection system. For example, a repair and maintenance organization (RMO) may have operating parameters designed for maintenance of a machine in a manufacturing facility, while the owner of the facility may have particular operating parameters for the machine that are designed for meeting a production goal. These goals, in this example relating to a maintenance goal or a production output, may be tracked by a different data collectors or sensors. For example, maintenance of a machine may be tracked by sensors including a temperature sensor, a vibration transducer, and a strain gauge while the production goal of a machine may be tracked by sensors including a speed sensor and a power consumption meter. The data collection system may (optionally using a neural net, machine learning system, deep learning system, or the like, which may occur under supervision by one or more supervisors (human or automated) intelligently manage data collectors aligned with different goals and assign weights, parameter modifications, or recommendations based on a factor, such as a bias towards one goal or a compromise to allow better alignment with all goals being tracked, for example. Compromises among the goals delivered to the data collection system may be based on one or more hierarchies or rules relating to the authority, role, criticality, or the like of the applicable goals. In embodiments, compromises among goals may be optimized using machine learning, such as a neural net, deep learning system, or other artificial intelligence system as described throughout this disclosure. For example, in a power plant where a turbine is operating, the data collection system may manage multiple data collectors, such as one directed to detecting the operational status of the turbine, one directed at identifying a probability of hitting a production goal, and one directed at determining if the operation of the turbine is meeting a fuel efficiency goal. Each of these data collectors may be populated with different sensors or data from different sensors (e.g., a vibration transducer to indicate operational status, a flow meter to indicate production goal, and a fuel gauge to indicate a fuel efficiency) whose output data are indicative of an aspect of a particular goal. Where a single sensor or a set of sensors is helpful for more than one goal, overlapping data collectors (having some sensors in common and other sensors not in common) may take input from that sensor or set of sensors, as managed by the data collection system. If there are constraints on data collection (such as due to power limitations, storage limitations, bandwidth limitations, input/output processing capabilities, or the like), a rule may indicate that one goal (e.g., a fuel utilization goal or a pollution reduction goal that is mandated by law or regulation) takes precedence, such that the data collection for the data collectors associated with that goal are maintained as others are paused or shut down. Management of prioritization of goals may be hierarchical or may occur by machine learning. The data collection system may be seeded with models, or may not be seeded at all, in iterating towards a predicted state (e.g., meeting a goal) given the current data it has acquired. In this example, during operation of the turbine the plant owner may decide to bias the system towards fuel efficiency. All of the data collectors may still be monitored, but as the self-organization functionality iterates and predicts that the system will not collect or is not collecting data sufficient to determine whether the system is or is not meeting a particular goal, the data collection system may recommend or implement changes directed at collecting the appropriate data. Further, the plant owner may structure the system with a bias towards a particular goal such that the recommended changes to data collection parameters affecting such goal are made in favor of making other recommended changes.

In embodiments, the data collection system may continue iterating in a deep-learning fashion to arrive at a distribution of data collectors, after being seeded with more than one data collection data type, that optimizes meeting more than one goal. For example, there may be multiple goals tracked for a refining environment, such as refining efficiency and economic efficiency. Refining efficiency for the refining system may be expressed by comparing fuel put into the system, which can be obtained by knowing the amount of and quality of the fuel being used, and the amount of the refined product output from the system, which is calculated using the flow out of the system. Economic efficiency of the refining system may be expressed as the ratio between costs to run the system, including fuel, labor, materials and services, and the refined product output from the system for a period of time. Data used to track refining efficiency may include data from a flow meter, quality data point(s), and a thermometer, and data used to track economic efficiency may be a flow of product output from the system and costs data. These data may be used in the data collection system to predict states; however, the self-organization functionality of the system may iterate towards a data collection strategy that is optimized to predict states related to both thermal and economic efficiency. The new data collection schema may include data used previously in the individual data collectors but may also use new data from different sensors or data sources.

The iteration of the data collection system may be governed by rules, in some embodiments. For example, the data collection system may be structured to collect data for seeding at a pre-determined frequency. The data collection system may be structured to iterate at least a number of times, such as when a new component/equipment/fuel source is added, when a sensor goes off-line, or as standard practice. For example, when a sensor measuring the rotation of a boring tool in an offshore drilling operation goes off-line and the data collection system begins acquiring data from a new sensor or data collector measuring the same data points, the data collection system may be structured to iterate for a number of times before the state is utilized in or allowed to affect any downstream actions. The data collection system may be structured to train off-line or train in situ/online. The data collection system may be structured to include static and/or manually input data in its data collectors. For example, a data collection system associated with such a boring tool may be structured to iterate towards predicting a distance bored based on a duration of operation, wherein the data collector(s) include data regarding the speed of the boring tools, a distance sensor, a temperature sensor, and the like.

In embodiments, the data collection system may be overruled. In embodiments, the data collection system may revert to prior settings, such as in the event the self-organization functionality fails, such as if the collected data is insufficient or inappropriately collected, if uncertainty is too high in a model-based system, if the system is unable to resolve conflicting rules in rule-based system, or the system cannot converge on a solution in any of the foregoing. For example, sensor data on a power generation system used by the data collection system may indicate a non-operational state (such as a seized turbine), but output sensors and visual inspection, such as by a drone, may indicate normal operation. In this event, the data collection system may revert to an original data collection schema for seeding the self-organization functionality. In another example, one or more point sensors on a refrigeration system may indicate imminent failure in a compressor, but the data collector self-organized to collect data associated towards determining a performance metric did not identify the failure. In this event, the data collector(s) will revert to an original setting or a version of the data collector setting that would have also identified the imminent failure of the compressor.

In embodiments, the data collection system may change data collector settings in the event that a new component is added that makes the system closer to a different system. For example, a vacuum distillation unit is added to an oil and gas refinery to distill naphthalene, but the current data collector settings for the data collection system are derived from a refinery that distills kerosene. In this example, a data structure with data collector settings for various systems may be searched for a system that is more closely matched to the current system. When a new system is identified as more closely matched, such as one that also distill naphthalene, the new data collector settings (which sensors to use, where to direct them, how frequently to sample, what types of data and points are needed, etc. as described herein) are used to seed the data collection system to iterate towards predicting a state for the system. In embodiments, the data collection system may change data collector settings in the event that a new set of data is available from a third party library. For example, a power generation plant may have optimized a specific turbine model to operate in a highly efficient way and deposited the data collector settings in a data structure. The data structure may be continuously scanned for new data collectors that better aid in monitoring power generation and thus, result in optimizing the operation of the turbine.

In embodiments, the data collection system may utilize self-organization functionality to uncover unknown variables. For example, the data collection system may iterate to identify a missing variable to be used for further iterations. For example, an under-utilized tank in a legacy condensate/make-up water system of a power station may have an unknown capacity because it is inaccessible and no documentation exists on the tank. Various aspects of the tank may be measured by a swarm of data collectors to arrive at an estimated volume (e.g., flow into a downstream space, duration of a dye traced solution to work through the system), which can then be fed into the data collection system as a new variable.

In embodiments, the data collection system node may be on a machine, on a data collector (or a group of them), in a network infrastructure (enterprise or other), or in the cloud. In embodiments, there may be distributed neurons across nodes (e.g., machine, data collector, network, cloud).

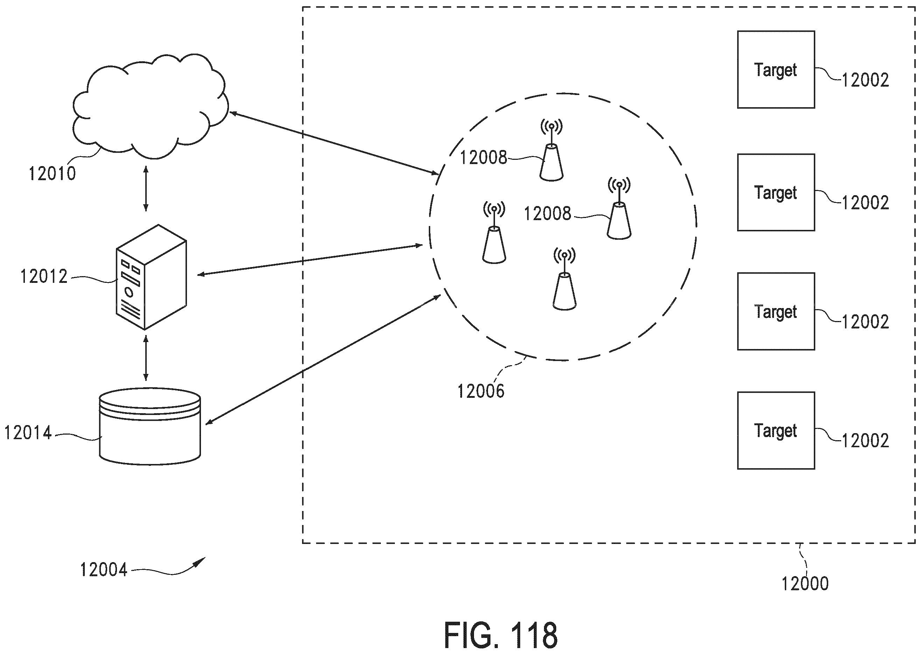

In an aspect, and as illustrated in Figure 118, a data collection system 12004 can be arranged to collect data in an industrial environment 12000, e.g., from one or more targets 12002. In the illustrated embodiments, the data collection system 12004 includes a group or "swarm" 12006 of data collectors 12008, a network 12010, a computing system 12012, and a database or data pool 12014. Each of the data collectors 12008 can include one or more input sensors and be communicatively coupled to any and all of the other components of the data collection system 12004, as is partially illustrated by the connecting arrows between components.

The targets 12002 can be any form of machinery or component thereof in an industrial environment 12000. Examples of such industrial environments 12000 include but are not limited to factories, pipelines, construction sites, ocean oil rigs, ships, airplanes or other aircraft, mining environments, drilling environments, refineries, distribution environments, manufacturing environments, energy source extraction environments, offshore exploration sites, underwater exploration sites, assembly lines, warehouses, power generation environments, and hazardous waste environments, each of which may include one or more targets 12002. Targets 12002 can take any form of item or location at which a sensor can obtain data. Examples of such targets 12002 include but are not limited to machines, pipelines, equipment, installations, tools, vehicles, turbines, speakers, lasers, automatons, computer equipment, industrial equipment, and switches.

The self-organization functionality of the data collection system 12004 can be performed at or by any of the components of the data collection system 12004. In embodiments, a data collector 12008 or the swarm 12006 of data collectors 12008 can self-organize without assistance from other components and based on, e.g., the data sensed by its associated sensors and other knowledge. In embodiments, the network 12010 can self-organize without assistance from other components and based on, e.g., the data sensed by the data collectors 12008 or other knowledge. Similarly, the computing system 12012 and/or the data pool 12014 without assistance from other components and based on, e.g., the data sensed by the data collectors 12008 or other knowledge. It should be appreciated that any combination or hybrid-type self-organization system can also be implemented.

For example only, the data collection system 12004 can perform or enable various methods or systems for data collection having self-organization functionality in an industrial environment 12000. These methods and systems can include analyzing a plurality of sensor inputs, e.g., received from or sensed by sensors at the data collector(s) 12008. The methods and systems can also include sampling the received data and self-organizing at least one of: (i) a storage operation of the data; (ii) a collection operation of sensors that provide the plurality of sensor inputs, and (iii) a selection operation of the plurality of sensor inputs.

In aspects, the storage operation can include storing the data in a local database, e.g., of a data collector 12008, a computing system 12012, and/or a data pool 12014. The data can also be summarized over a given time period to reduce a size of the sensed data. The summarized data can be sent to one or more data acquisition boxes, to one or more data centers, and/or to other components of the system or other, separate systems. Summarizing the data over a given time period to reduce the size of the data, in some aspects, can include determining a speed at which data can be sent via a network (e.g., network 12010), wherein the size of the summarized data corresponds to the speed at which data can be sent continuously in real time via the network. In such aspects, or others, the summarized data can be continuously sent, e.g., to an external device via the network.

In various implementations, the methods and systems can include committing the summarized data to a local ledger, identifying one or more other accessible signal acquisition instruments on an accessible network, and/or synchronizing the summarized data at the local ledger with at least one of the other accessible signal acquisition instruments (e.g., data collectors 12008). In embodiments, receiving a remote stream of sensor data from one or more other accessible signal acquisition instruments via a network can be included. An advertisement message to a potential client indicating availability of at least one of the locally stored data, the summarized data, and the remote stream of sensor data can also or alternatively be sent.

The methods and systems can include identifying one or more other accessible signal acquisition instruments (e.g., data collectors 12008) on an accessible network (e.g., 12010), nominating at least one of the one or more other accessible signal acquisition instruments as a logical communication hub, and providing the logical communication hub with a list of available data and their associated sources. The list of available data and their associated sources can be provided to the logical communication hub utilizing a hybrid peer-to-peer communications protocol.

In some aspects, the storage operation can include storing the data in a local database and automatically organizing at least one parameter of the data pool utilizing machine learning. The organizing can be based at least in part on receiving information regarding at least one of an accuracy of classification and an accuracy of prediction of an external machine learning system that uses data from the data pool (e.g., data pool 12014).

The present disclosure describes a method for data collection in an industrial environment having self-organization functionality, the method according to one disclosed non-limiting embodiment of the present disclosure can include analyzing a plurality of sensor inputs, sampling data received from the sensor inputs and self-organizing at least one of: (i) a storage operation of the data; (ii) a collection operation of sensors that provide the plurality of sensor inputs, and (iii) a selection operation of the plurality of sensor inputs.

The present disclosure describes a system for data collection in an industrial environment having self-organization functionality, the system according to one disclosed non-limiting embodiment of the present disclosure can include a data collector for handling a plurality of sensor inputs from sensors in the industrial environment and for generating data associated with the plurality of sensor inputs, and a self-organizing system for self-organizing at least one of (i) a storage operation of the data, (ii) a data collection operation of sensors that provide the plurality of sensor inputs, and (iii) a selection operation of the plurality of sensor inputs.

The present disclosure describes a method for data collection in an industrial environment having self-organization functionality, the method according to one disclosed non-limiting embodiment of the present disclosure can include analyzing a plurality of sensor inputs, sampling data received from the sensor inputs; and self-organizing at least one of: (i) a storage operation of the data; (ii) a collection operation of sensors that provide the plurality of sensor inputs, and (iii) a selection operation of the plurality of sensor inputs, wherein the storage operation includes storing the data in a local database, and summarizing the data over a given time period to reduce a size of the data.

In embodiments, the method further includes sending the summarized data to one or more data acquisition boxes.

In embodiments, the method further includes sending the summarized data to one or more data centers.

In embodiments, summarizing the data over a given time period to reduce the size of the data includes determining a speed at which data can be sent via a network, wherein the size of the summarized data corresponds to the speed at which data can be sent continuously in real time via the network.

In embodiments, the method further includes continuously sending the summarized data to an external device via the network.

The present disclosure describes a method for data collection in an industrial environment having self-organization functionality, the method according to one disclosed non-limiting embodiment of the present disclosure can include analyzing a plurality of sensor inputs, sampling data received from the sensor inputs and self-organizing at least one of: (i) a storage operation of the data; (ii) a collection operation of sensors that provide the plurality of sensor inputs, and (iii) a selection operation of the plurality of sensor inputs, wherein the storage operation includes storing the data in a local database, summarizing the data over a given time period to reduce a size of the data, committing the summarized data to a local ledger, identifying one or more other accessible signal acquisition instruments on an accessible network, and synchronizing the summarized data at the local ledger with at least one of the other accessible signal acquisition instruments. In embodiments, the method further includes receiving a remote stream of sensor data from one or more other accessible signal acquisition instruments via a network.

In embodiments, the method further includes sending an advertisement message to a potential client indicating availability of at least one of the locally stored data, the summarized data, and the remote stream of sensor data.

The present disclosure describes a method for data collection in an industrial environment having self-organization functionality, the method according to one disclosed non-limiting embodiment of the present disclosure can include analyzing a plurality of sensor inputs; sampling data received from the sensor inputs, self-organizing at least one of: (i) a storage operation of the data (ii) a collection operation of sensors that provide the plurality of sensor inputs, and (iii) a selection operation of the plurality of sensor inputs, wherein the storage operation includes storing the data in a local database, and summarizing the data over a given time period to reduce a size of the data, identifying one or more other accessible signal acquisition instruments on an accessible network, nominating at least one of the one or more other accessible signal acquisition instruments as a logical communication hub, and providing the logical communication hub with a list of available data and their associated sources.

In embodiments, the list of available data and their associated sources is provided to the logical communication hub utilizing a hybrid peer-to-peer communications protocol.

The present disclosure describes a method for data collection in an industrial environment having self-organization functionality, the method according to one disclosed non-limiting embodiment of the present disclosure can include analyzing a plurality of sensor inputs, sampling data received from the sensor inputs, and self-organizing at least one of (i) a storage operation of the data, (ii) a collection operation of sensors that provide the plurality of sensor inputs, and (iii) a selection operation of the plurality of sensor inputs, wherein the storage operation includes storing the data in a local database, summarizing the data over a given time period to reduce a size of the data, storing the data in a local database, and automatically organizing at least one parameter of the database utilizing machine learning, wherein the organizing is based at least in part on receiving information regarding at least one of an accuracy of classification and an accuracy of prediction of an external machine learning system that uses data from the database.

In aspects, the collection operation of sensors that provide the plurality of sensor inputs can include receiving instructions directing a mobile data collector unit (e.g., data collector 12008) to operate sensors at a target (e.g., 12002), wherein at least one of the plurality of sensors is arranged in the mobile data collector unit. A communication can be transmitted to one or more other mobile data collector units (12008) regarding the instructions. The swarm 12006 or portion thereof can self-organize a distribution of the mobile data collector unit and the one or more other mobile data collector units (e.g., data collectors 12008) at the target 12002.

In aspects, self-organizing the distribution of the mobile data collector units at the target 12002 comprises utilizing a machine learning algorithm to determine a respective target location for each of the mobile data collector units. The machine learning algorithm can utilize one or more of a plurality of features to determine the respective target locations. Examples of the features can include: battery life of the mobile data collector units (data collectors 12008), a type of the target 12002 being sensed, a type of signal being sensed, a size of the target 12002, a number of mobile data collector units (data collectors 12008) needed to cover the target 12002, a number of data points needed for the target 12002, a success in prior accomplishment of signal capture, information received from a headquarters or other components from which the instructions are received, and historical information regarding the sensors operated at the target 12002.

In implementations, self-organizing the distribution of the mobile data collector unit and the one or more other mobile data collector units at the target location can include proposing a target location for the mobile data collector unit(s), transmitting the target location to at least one other mobile data collector units, receiving confirmation that there is no contention for the target location, directing one of the mobile data collector units to the target location, and collecting sensor data at the target location from the directed mobile data collector unit.

Self-organizing the distribution of the mobile data collector unit and the one or more other mobile data collector units at the target location can also include, in certain embodiments, proposing a target location for the mobile data collector unit, transmitting the target location to at least one of the one or more other mobile data collector units, receiving a proposal for a new target location, directing the mobile data collector unit to the new target location, and collecting sensor data at the new target location from the mobile data collector unit.

In additional or alternative aspects, self-organizing the distribution of the mobile data collector unit and the one or more other mobile data collector units at the target location can comprise proposing a target location for the mobile data collector unit, determining that at least one of the one or more other mobile data collector units is at or moving to the target location, determining a new target location based on the at least one of the one or more other mobile data collector units being at or moving to the target location, directing the mobile data collector unit to the new target location, and collecting sensor data at the new target location from the mobile data collector unit.

Self-organizing the distribution of the mobile data collector unit and the one or more other mobile data collector units at the target location can further comprise determining a type of the sensors to operate at the target 12002, receiving confirmation that there is no contention for the type of sensors, directing the mobile data collector unit to operate the type of sensors at the target 12002, and collecting sensor data from the type of sensors at the target 12002 from the mobile data collector unit.

In aspects, self-organizing the distribution of the mobile data collector unit and the one or more other mobile data collector units at the target location can include determining a type of the sensors to operate at the target, transmitting the type of the sensors to at least one of the one or more other mobile data collector units, receiving a proposal for a new type of the sensors, directing the mobile data collector unit to operate the new type of sensors at the target, and collecting sensor data from the new type of sensors at the target from the mobile data collector unit.

Self-organizing the distribution of the mobile data collector unit and the one or more other mobile data collector units at the target location can include determining a type of the sensors to operate at the target, determining that at least one of the one or more other mobile data collector units is operating or can operate the type of the sensors at the target, determining a new type of the sensors based on the at least one of the one or more other mobile data collector units operating or being capable of operating the type of the sensors at the target, directing the mobile data collector unit to operate the new type of sensors at the target, and collecting sensor data from the new type of sensors at the target from the mobile data collector unit.

Self-organizing the distribution of the mobile data collector unit and the one or more other mobile data collector units at the target location, in some implementations, can comprise utilizing a swarm optimization algorithm to allocate areas of sensor responsibility amongst the mobile data collector unit and the one or more other mobile data collector units. Examples of the swarm optimization algorithm include but are not limited to Genetic Algorithms (GA), Ant Colony Optimization (ACO), Particle Swarm Optimization (PSO), Differential Evolution (DE), Artificial Bee Colony (ABC), Glowworm Swarm Optimization (GSO), and Cuckoo Search Algorithm (CSA), Genetic Programming (GP), Evolution Strategy (ES), Evolutionary Programming (EP), Firefly Algorithm (FA), Bat Algorithm (BA) and Grey Wolf Optimizer (GWO), or combinations thereof.

The present disclosure describes a method for data collection in an industrial environment having self-organization functionality, the method according to one disclosed non-limiting embodiment of the present disclosure can include analyzing a plurality of sensor inputs, sampling data received from the sensor inputs, and self-organizing at least one of (i) a storage operation of the data, (ii) a collection operation of sensors that provide the plurality of sensor inputs, and (iii) a selection operation of the plurality of sensor inputs.

The present disclosure describes a system for data collection in an industrial environment having automated self-organization, the system according to one disclosed non-limiting embodiment of the present disclosure can include a data collector for handling a plurality of sensor inputs from sensors in the industrial environment and for generating data associated with the plurality of sensor inputs, and a self-organizing system for self-organizing at least one of (i) a storage operation of the data, (ii) a data collection operation of sensors that provide the plurality of sensor inputs, and (iii) a selection operation of the plurality of sensor inputs.

The present disclosure describes a method for data collection in an industrial environment having self-organization functionality, the method according to one disclosed non-limiting embodiment of the present disclosure can include analyzing a plurality of sensor inputs; sampling data received from the sensor inputs and self-organizing at least one of (i) a storage operation of the data, (ii) a collection operation of sensors that provide the plurality of sensor inputs, and (iii) a selection operation of the plurality of sensor inputs, wherein the collection operation of sensors that provide the plurality of sensor inputs includes receiving instructions directing a mobile data collector unit to operate sensors at a target, wherein at least one of the plurality of sensors is arranged in the mobile data collector unit, transmitting a communication to one or more other mobile data collector units regarding the instructions, and self-organizing a distribution of the mobile data collector unit and the one or more other mobile data collector units at the target.

In embodiments, self-organizing the distribution of the mobile data collector unit and the one or more other mobile data collector units at the target includes utilizing a machine learning algorithm to determine a respective target location for each of the mobile data collector units.

In embodiments, the machine learning algorithm utilizes one or more of a plurality of features to determine the respective target locations, the plurality of features including: battery life of the mobile data collector units, a type of the target being sensed, a type of signal being sensed, a size of the target, a number of mobile data collector units needed to cover the target, a number of data points needed for the target, a success in prior accomplishment of signal capture, information received from a headquarters from which the instructions are received, and historical information regarding the sensors operated at the target.

In embodiments, self-organizing the distribution of the mobile data collector unit and the one or more other mobile data collector units at the target location includes proposing a target location for the mobile data collector unit, transmitting the target location to at least one of the one or more other mobile data collector units, receiving confirmation that there is no contention for the target location, directing the mobile data collector unit to the target location, and collecting sensor data at the target location from the mobile data collector unit.

In embodiments, self-organizing the distribution of the mobile data collector unit and the one or more other mobile data collector units at the target location includes proposing a target location for the mobile data collector unit, transmitting the target location to at least one of the one or more other mobile data collector units, receiving a proposal for a new target location, directing the mobile data collector unit to the new target location and collecting sensor data at the new target location from the mobile data collector unit.

In embodiments, self-organizing the distribution of the mobile data collector unit and the one or more other mobile data collector units at the target location includes proposing a target location for the mobile data collector unit, determining that at least one of the one or more other mobile data collector units is at or moving to the target location, determining a new target location based on the at least one of the one or more other mobile data collector units being at or moving to the target location, directing the mobile data collector unit to the new target location and collecting sensor data at the new target location from the mobile data collector unit.

In embodiments, self-organizing the distribution of the mobile data collector unit and the one or more other mobile data collector units at the target location includes determining a type of the sensors to operate at the target, receiving confirmation that there is no contention for the type of sensors, directing the mobile data collector unit to operate the type of sensors at the target, and
collecting sensor data from the type of sensors at the target from the mobile data collector unit.

The present disclosure describes a method for data collection in an industrial environment having self-organization functionality, the method according to one disclosed non-limiting embodiment of the present disclosure can include analyzing a plurality of sensor inputs, sampling data received from the sensor inputs, and self-organizing at least one of (i) a storage operation of the data (ii) a collection operation of sensors that provide the plurality of sensor inputs, and (iii) a selection operation of the plurality of sensor inputs, wherein the collection operation of sensors that provide the plurality of sensor inputs includes receiving instructions directing a mobile data collector unit to operate sensors at a target, wherein at least one of the plurality of sensors is arranged in the mobile data collector unit, transmitting a communication to one or more other mobile data collector units regarding the instructions, self-organizing a distribution of the mobile data collector unit and the one or more other mobile data collector units at the target, wherein self-organizing the distribution of the mobile data collector unit and the one or more other mobile data collector units at the target location includes determining a type of the sensors to operate at the target, transmitting the type of the sensors to at least one of the one or more other mobile data collector units, receiving a proposal for a new type of the sensors, directing the mobile data collector unit to operate the new type of sensors at the target and collecting sensor data from the new type of sensors at the target from the mobile data collector unit.

In embodiments, self-organizing the distribution of the mobile data collector unit and the one or more other mobile data collector units at the target location includes determining a type of the sensors to operate at the target, determining that at least one of the one or more other mobile data collector units is operating or can operate the type of the sensors at the target, determining a new type of the sensors based on the at least one of the one or more other mobile data collector units operating or being capable of operating the type of the sensors at the target, directing the mobile data collector unit to operate the new type of sensors at the target, and collecting sensor data from the new type of sensors at the target from the mobile data collector unit.

In embodiments, self-organizing the distribution of the mobile data collector unit and the one or more other mobile data collector units at the target location includes utilizing a swarm optimization algorithm to allocate areas of sensor responsibility amongst the mobile data collector unit and the one or more other mobile data collector units.

In embodiments, the swarm optimization algorithm is one or more types of Genetic Algorithms (GA), Ant Colony Optimization (ACO), Particle Swarm Optimization (PSO), Differential Evolution (DE), Artificial Bee Colony (ABC), Glowworm Swarm Optimization (GSO), and Cuckoo Search Algorithm (CSA), Genetic Programming (GP), Evolution Strategy (ES), Evolutionary Programming (EP), Firefly Algorithm (FA), Bat Algorithm (BA) and Grey Wolf Optimizer (GWO).

In aspects, the selection operation can comprise receiving a signal relating to at least one condition of the industrial environment 12000 and, based on the signal, changing at least one of the sensor inputs analyzed and a frequency of the sampling. The at least one condition of the industrial environment can be a signal-to-noise ratio of the sampled data. The selection operation can include identifying a target signal to be sensed. Additionally, the selection operation further can include identifying one or more non-target signals in a same frequency band as the target signal to be sensed and, based on the identified one or more non-target signals, changing at least one of the sensor inputs analyzed and a frequency of the sampling.

The selection operation can comprise identifying other data collectors sensing in a same signal band as the target signal to be sensed, and, based on the identified other data collectors, changing at least one of the sensor inputs analyzed and a frequency of the sampling. In implementations, the selection operation can further comprise identifying a level of activity of a target associated with the target signal to be sensed and, based on the identified level of activity, changing at least one of the sensor inputs analyzed and a frequency of the sampling.

The selection operation can further comprise receiving data indicative of environmental conditions near a target associated with the target signal, comparing the received environmental conditions of the target with past environmental conditions near the target or another target similar to the target, and, based on the comparison, changing at least one of the sensor inputs analyzed and a frequency of the sampling. At least a portion of the received sampling data can be transmitted to another data collector according to a predetermined hierarchy of data collection.

The selection operation further comprises, in some aspects, receiving data indicative of environmental conditions near a target associated with the target signal, transmitting at least a portion of the received sampling data to another data collector according to a predetermined hierarchy of data collection, receiving feedback via a network connection relating to a quality or sufficiency of the transmitted data, analyzing the received feedback, and, based on the analysis of the received feedback, changing at least one of the sensor inputs analyzed, the frequency of sampling, the data stored, and the data transmitted.

Additionally, or alternatively, the selection operation can comprise receiving data indicative of environmental conditions near a target associated with the target signal, transmitting at least a portion of the received sampling data to another data collector according to a predetermined hierarchy of data collection, receiving feedback via a network connection relating to one or more yield metrics of the transmitted data, analyzing the received feedback, and, based on the analysis of the received feedback, changing at least one of the sensor inputs analyzed, the frequency of sampling, the data stored, and the data transmitted.

In implementations, the selection operation can include receiving data indicative of environmental conditions near a target associated with the target signal, transmitting at least a portion of the received sampling data to another data collector according to a predetermined hierarchy of data collection, receiving feedback via a network connection relating to power utilization, analyzing the received feedback, and based on the analysis of the received feedback, changing at least one of the sensor inputs analyzed, the frequency of sampling, the data stored, and the data transmitted.

The selection operation can also or alternatively comprise receiving data indicative of environmental conditions near a target associated with the target signal, transmitting at least a portion of the received sampling data to another data collector according to a predetermined hierarchy of data collection, receiving feedback via a network connection relating to a quality or sufficiency of the transmitted data, analyzing the received feedback, and, based on the analysis of the received feedback, executing a dimensionality reduction algorithm on the sensed data. The dimensionality reduction algorithm can be one or more of a Decision Tree, Random Forest, Principal Component Analysis, Factor Analysis, Linear Discriminant Analysis, Identification based on correlation matrix, Missing Values Ratio, Low Variance Filter, Random Projections, Nonnegative Matrix Factorization, Stacked Auto-encoders, Chi-square or Information Gain, Multidimensional Scaling, Correspondence Analysis, Factor Analysis, Clustering, and Bayesian Models. The dimensionality reduction algorithm can be performed at a data collector 12008, a swarm 12006 of data collectors 12008, a network 12010, a computing system 12012, a data pool 12014, or combination thereof. In aspects, executing the dimensionality reduction algorithm can comprise sending the sensed data to a remote computing device.

In aspects, a system for self-organizing collection and storage of data collection in a power generation environment can include a data collector for handling a plurality of sensor inputs from various sensors. Such sensors can be a component of the data collector, external to the data collector (e.g., external sensors or components of different data collector(s)), or a combination thereof. The plurality of sensor inputs can be configured to sense at least one of an operational mode, a fault mode, and a health status of at least one target system. Examples of such target systems include but are not limited to a fuel handling system, a power source, a turbine, a generator, a gear system, an electrical transmission system, a transformer, a fuel cell, and an energy storage device/system. The system can also include a self-organizing system that can be configured for self-organizing at least one of: (i) a storage operation of the data; (ii) a data collection operation of the sensors that provide the plurality of sensor inputs, and (iii) a selection operation of the plurality of sensor input, as is described herein.

In aspects, the system can include a swarm 12006 of mobile data collectors (e.g., data collectors 12008). Further, in additional or alternative aspects, the self-organizing system can generate, iterate, optimize, etc. a storage specification for organizing storage of the data. The storage specification, e.g., can specify which data will be stored for local storage in the power generation environment, and which data will be output for streaming via a network connection (e.g., network 12010) from the power generation environment. Other data collection, generation, and/or storage operations can be performed or enabled by the system, as is described herein.

In a non-limiting example, the system can include a plurality of sensors configured to sense various parameters in the environment of a turbine as a target system. Vibration sensors, temperature sensors, acoustic sensors, strain gauges, and accelerometers, and the like may be utilized by the system to generate data regarding the operation of the turbine. As mentioned herein, any and all of the storage operation, the data collection operation, and the selection operation of the plurality of sensor inputs may be adapted, optimized, learned, or otherwise self-organized by the system.

In aspects, a system for self-organizing collection and storage of data collection in energy source extraction environment can include a data collector for handling a plurality of sensor inputs from various sensors. Examples of such energy source extraction environments include a coal mining environment, a metal mining environment, a mineral mining environment, and an oil drilling environment, although other extraction environments are contemplated by the present disclosure. The sensors utilized can be a component of the data collector, external to the data collector (e.g., external sensors or components of different data collector(s)), or a combination thereof. The plurality of sensor inputs can be configured to sense at least one of an operational mode, a fault mode, and a health status of at least one target system. Examples of such target systems include but are not limited to a hauling system, a lifting system, a drilling system, a mining system, a digging system, a boring system, a material handling system, a conveyor system, a pipeline system, a wastewater treatment system, and a fluid pumping system.

The system can also include a self-organizing system that can be configured for self-organizing at least one of: (i) a storage operation of the data; (ii) a data collection operation of the sensors that provide the plurality of sensor inputs, and (iii) a selection operation of the plurality of sensor input, as is described herein. In aspects, the system can include a swarm 12006 of mobile data collectors (e.g., data collectors 12008). Further, in additional or alternative aspects, the self-organizing system can generate, iterate, optimize, etc. a storage specification for organizing storage of the data. The storage specification, e.g., can specify which data will be stored for local storage in the power generation environment, and which data will be output for streaming via a network connection (e.g., network 12010) from the power generation environment. Other data collection, generation, and/or storage operations can be performed or enabled by the system, as is described herein.

In a non-limiting example, the system can include a plurality of sensors configured to sense various parameters in the environment of a fluid pumping system as a target system. Vibration sensors, flow sensors, pressure sensors, temperature sensors, acoustic sensors, and the like may be utilized by the system to generate data regarding the operation of the fluid pumping system. As mentioned herein, any and all of the storage operation, the data collection operation, and the selection operation of the plurality of sensor inputs may be adapted, optimized, learned, or otherwise self-organized by the system.

In implementations, a system for self-organizing collection and storage of data collection in a manufacturing environment can include a data collector for handling a plurality of sensor inputs from various sensors. Such sensors can be a component of the data collector, external to the data collector (e.g., external sensors or components of different data collector(s)), or a combination thereof. The plurality of sensor inputs can be configured to sense at least one of an operational mode, a fault mode, and a health status of at least one target system. Examples of such target systems include but are not limited to a power system, a conveyor system, a generator, an assembly line system, a wafer handling system, a chemical vapor deposition system, an etching system, a printing system, a robotic handling system, a component assembly system, an inspection system, a robotic assembly system, and a semi-conductor production system. The system can also include a self-organizing system that can be configured for self-organizing at least one of: (i) a storage operation of the data; (ii) a data collection operation of the sensors that provide the plurality of sensor inputs, and (iii) a selection operation of the plurality of sensor input, as is described herein.

In aspects, the system can include a swarm 12006 of mobile data collectors (e.g., data collectors 12008). Further, in additional or alternative aspects, the self-organizing system can generate, iterate, optimize, etc. a storage specification for organizing storage of the data. The storage specification, e.g., can specify which data will be stored for local storage in the power generation environment, and which data will be output for streaming via a network connection (e.g., network 12010) from the power generation environment. Other data collection, generation, and/or storage operations can be performed or enabled by the system, as is described herein.

In a non-limiting example, the system can include a plurality of sensors configured to sense various parameters in the environment of a wafer handling system as a target system. Vibration sensors, fluid flow sensors, pressure sensors, gas sensors, temperature sensors, and the like may be utilized by the system to generate data regarding the operation of the wafer handling system. As mentioned herein, any and all of the storage operation, the data collection operation, and the selection operation of the plurality of sensor inputs may be adapted, optimized, learned, or otherwise self-organized by the system.

Also disclosed are embodiments of an additional or alternative system for self-organizing collection and storage of data collection in refining environment. Such system(s) can include a data collector for handling a plurality of sensor inputs from various sensors. Examples of such refining environments include a chemical refining environment, a pharmaceutical refining environment, a biological refining environment, and a hydrocarbon refining environment, although other refining environments are contemplated by the present disclosure. The sensors utilized can be a component of the data collector, external to the data collector (e.g., external sensors or components of different data collector(s)), or a combination thereof. The plurality of sensor inputs can be configured to sense at least one of an operational mode, a fault mode, and a health status of at least one target system. Examples of such target systems include but are not limited to a power system, a pumping system, a mixing system, a reaction system, a distillation system, a fluid handling system, a heating system, a cooling system, an evaporation system, a catalytic system, a moving system, and a container system.

The system can also include a self-organizing system that can be configured for self-organizing at least one of: (i) a storage operation of the data; (ii) a data collection operation of the sensors that provide the plurality of sensor inputs, and (iii) a selection operation of the plurality of sensor input, as is described herein. In aspects, the system can include a swarm 12006 of mobile data collectors (e.g., data collectors 12008). Further, in additional or alternative aspects, the self-organizing system can generate, iterate, optimize, etc. a storage specification for organizing storage of the data. The storage specification, e.g., can specify which data will be stored for local storage in the power generation environment, and which data will be output for streaming via a network connection (e.g., network 12010) from the power generation environment. Other data collection, generation, and/or storage operations can be performed or enabled by the system, as is described herein.

In a non-limiting example, the system can include a plurality of sensors configured to sense various parameters in the refining environment of a heating system as a target system. Temperature sensors, fluid flow sensors, pressure sensors, and the like may be utilized by the system to generate data regarding the operation of the heating system. As mentioned herein, any and all of the storage operation, the data collection operation, and the selection operation of the plurality of sensor inputs may be adapted, optimized, learned, or otherwise self-organized by the system.

In aspects, a system for self-organizing collection and storage of data collection in a distribution environment can include a data collector for handling a plurality of sensor inputs from various sensors. Such sensors can be a component of the data collector, external to the data collector (e.g., external sensors or components of different data collector(s)), or a combination thereof. The plurality of sensor inputs can be configured to sense at least one of an operational mode, a fault mode, and a health status of at least one target system. Examples of such target systems include but are not limited to a power system, a conveyor system, a robotic transport system, a robotic handling system, a packing system, a cold storage system, a hot storage system, a refrigeration system, a vacuum system, a hauling system, a lifting system, an inspection system, and a suspension system. The system can also include a self-organizing system that can be configured for self-organizing at least one of: (i) a storage operation of the data; (ii) a data collection operation of the sensors that provide the plurality of sensor inputs, and (iii) a selection operation of the plurality of sensor input, as is described herein.

In aspects, the system can include a swarm 12006 of mobile data collectors (e.g., data collectors 12008). Further, in additional or alternative aspects, the self-organizing system can generate, iterate, optimize, etc. a storage specification for organizing storage of the data. The storage specification, e.g., can specify which data will be stored for local storage in the power generation environment, and which data will be output for streaming via a network connection (e.g., network 12010) from the power generation environment. Other data collection, generation, and/or storage operations can be performed or enabled by the system, as is described herein.

In a non-limiting example, the system can include a plurality of sensors configured to sense various parameters in the distribution environment of a refrigeration system as a target system. Power sensors, temperature sensors, vibration sensors, strain gauges, and the like may be utilized by the system to generate data regarding the operation of the turbine. As mentioned herein, any and all of the storage operation, the data collection operation, and the selection operation of the plurality of sensor inputs may be adapted, optimized, learned, or otherwise self-organized by the system.

The present disclosure describes a method for data collection in an industrial environment having self-organization functionality, the method according to one disclosed non-limiting embodiment of the present disclosure can include analyzing a plurality of sensor inputs, sampling data received from the sensor inputs, and self-organizing at least one of (i) a storage operation of the data, (ii) a collection operation of sensors that provide the plurality of sensor inputs, and (iii) a selection operation of the plurality of sensor inputs.

The present disclosure describes a system for data collection in an industrial environment having automated self-organization, the system according to one disclosed non-limiting embodiment of the present disclosure can include a data collector for handling a plurality of sensor inputs from sensors in the industrial environment and for generating data associated with the plurality of sensor inputs, and a self-organizing system for self-organizing at least one of (i) a storage operation of the data, (ii) a data collection operation of sensors that provide the plurality of sensor inputs, and (iii) a selection operation of the plurality of sensor inputs.

The present disclosure describes a method for data collection in an industrial environment having self-organization functionality, the method according to one disclosed non-limiting embodiment of the present disclosure can include analyzing a plurality of sensor inputs, sampling data received from the sensor inputs, and self-organizing at least one of (i) a storage operation of the data, (ii) a collection operation of sensors that provide the plurality of sensor inputs, and (iii) a selection operation of the plurality of sensor inputs, wherein the selection operation includes

receiving a signal relating to at least one condition of the industrial environment, based on the signal, changing at least one of the sensor inputs analyzed and a frequency of the sampling.

In embodiments, the at least one condition of the industrial environment is a signal-to-noise ratio of the sampled data.

In embodiments, the selection operation includes identifying a target signal to be sensed.

In embodiments, the selection operation further includes identifying one or more non-target signals in a same frequency band as the target signal to be sensed, and based on the identified one or more non-target signals, changing at least one of the sensor inputs analyzed and a frequency of the sampling.

In embodiments, the selection operation further includes identifying other data collectors sensing in a same signal band as the target signal to be sensed, and based on the identified other data collectors, changing at least one of the sensor inputs analyzed and a frequency of the sampling.

In embodiments, the selection operation further includes identifying a level of activity of a target associated with the target signal to be sensed, and based on the identified level of activity, changing at least one of the sensor inputs analyzed and a frequency of the sampling.

In embodiments, the selection operation further includes receiving data indicative of environmental conditions near a target associated with the target signal, comparing the received environmental conditions of the target with past environmental conditions near the target or another target similar to the target, and based on the comparison, changing at least one of the sensor inputs analyzed and a frequency of the sampling.

In embodiments, the selection operation further includes transmitting at least a portion of the received sampling data to another data collector according to a predetermined hierarchy of data collection.

The present disclosure describes a method for data collection in an industrial environment having self-organization functionality, the method according to one disclosed non-limiting embodiment of the present disclosure can include analyzing a plurality of sensor inputs,

sampling data received from the sensor inputs, and self-organizing at least one of (i) a storage operation of the data, (ii) a collection operation of sensors that provide the plurality of sensor inputs, and (iii) a selection operation of the plurality of sensor inputs, wherein the selection operation includes identifying a target signal to be sensed, receiving a signal relating to at least one condition of the industrial environment, based on the signal, changing at least one of the sensor inputs analyzed and a frequency of the sampling, receiving data indicative of environmental conditions near a target associated with the target signal, transmitting at least a portion of the received sampling data to another data collector according to a predetermined hierarchy of data collection, receiving feedback via a network connection relating to a quality or sufficiency of the transmitted data, analyzing the received feedback, and based on the analysis of the received feedback, changing at least one of the sensor inputs analyzed, the frequency of sampling, the data stored, and the data transmitted.

The present disclosure describes a method for data collection in an industrial environment having self-organization functionality, the method according to one disclosed non-limiting embodiment of the present disclosure can include analyzing a plurality of sensor inputs, sampling data received from the sensor inputs, and self-organizing at least one of (i) a storage operation of the data, (ii) a collection operation of sensors that provide the plurality of sensor inputs, and (iii) a selection operation of the plurality of sensor inputs, wherein the selection operation includes identifying a target signal to be sensed, receiving a signal relating to at least one condition of the industrial environment, based on the signal, changing at least one of the sensor inputs analyzed and a frequency of the sampling, receiving data indicative of environmental conditions near a target associated with the target signal, transmitting at least a portion of the received sampling data to another data collector according to a predetermined hierarchy of data collection, receiving feedback via a network connection relating to one or more yield metrics of the transmitted data, analyzing the received feedback, and based on the analysis of the received feedback, changing at least one of the sensor inputs analyzed, the frequency of sampling, the data stored, and the data transmitted.

The present disclosure describes a method for data collection in an industrial environment having self-organization functionality, the method according to one disclosed non-limiting embodiment of the present disclosure can include analyzing a plurality of sensor inputs, sampling data received from the sensor inputs, and self-organizing at least one of (i) a storage operation of the data, (ii) a collection operation of sensors that provide the plurality of sensor inputs, and (iii) a selection operation of the plurality of sensor inputs, wherein the selection operation includes identifying a target signal to be sensed, receiving a signal relating to at least one condition of the industrial environment, based on the signal, changing at least one of the sensor inputs analyzed and a frequency of the sampling, receiving data indicative of environmental conditions near a target associated with the target signal, transmitting at least a portion of the received sampling data to another data collector according to a predetermined hierarchy of data collection, receiving feedback, via a network connection relating to power utilization, analyzing the received feedback, and based on the analysis of the received feedback, changing at least one of the sensor inputs analyzed, the frequency of sampling, the data stored, and the data transmitted.

The present disclosure describes a method for data collection in an industrial environment having self-organization functionality, the method according to one disclosed non-limiting embodiment of the present disclosure can include analyzing a plurality of sensor inputs, sampling data received from the sensor inputs, and self-organizing at least one of (i) a storage operation of the data, (ii) a collection operation of sensors that provide the plurality of sensor inputs, and (iii) a selection operation of the plurality of sensor inputs, wherein the selection operation includes identifying a target signal to be sensed, receiving a signal relating to at least one condition of the industrial environment, based on the signal, changing at least one of the sensor inputs analyzed and a frequency of the sampling, receiving data indicative of environmental conditions near a target associated with the target signal, transmitting at least a portion of the received sampling data to another data collector according to a predetermined hierarchy of data collection, receiving feedback via a network connection relating to a quality or sufficiency of the transmitted data, analyzing the received feedback, and based on the analysis of the received feedback, executing a dimensionality reduction algorithm on the sensed data.

In embodiments, the dimensionality reduction algorithm is one or more of a Decision Tree, Random Forest, Principal Component Analysis, Factor Analysis, Linear Discriminant Analysis, Identification based on correlation matrix, Missing Values Ratio, Low Variance Filter, Random Projections, Nonnegative Matrix Factorization, Stacked Auto-encoders, Chi-square or Information Gain, Multidimensional Scaling, Correspondence Analysis, Factor Analysis, Clustering, and Bayesian Models.

In embodiments, the dimensionality reduction algorithm is performed at a data collector.

In embodiments, executing the dimensionality reduction algorithm includes sending the sensed data to a remote computing device.

The present disclosure describes a method for data collection in an industrial environment having self-organization functionality, the method according to one disclosed non-limiting embodiment of the present disclosure can include analyzing a plurality of sensor inputs, sampling data received from the sensor inputs, and self-organizing at least one of (i) a storage operation of the data, (ii) a collection operation of sensors that provide the plurality of sensor inputs, and (iii) a selection operation of the plurality of sensor inputs, wherein the selection operation includes identifying a target signal to be sensed, receiving a signal relating to at least one condition of the industrial environment, based on the signal, changing at least one of the sensor inputs analyzed and a frequency of the sampling, receiving data indicative of environmental conditions near a target associated with the target signal, transmitting at least a portion of the received sampling data to another data collector according to a predetermined hierarchy of data collection, receiving feedback via a network connection relating to at least one of a bandwidth and a quality or of the network connection, analyzing the received feedback, and based on the analysis of the received feedback, changing at least one of the sensor inputs analyzed, the frequency of sampling, the data stored, and the data transmitted.

The present disclosure describes a system for self-organizing collection and storage of data collection in a power generation environment, the system according to one disclosed non-limiting embodiment of the present disclosure can include a data collector for handling a plurality of sensor inputs from sensors in the power generation environment, wherein the plurality of sensor inputs is configured to sense at least one of an operational mode, a fault mode, and a health status of at least one target system selected from a group consisting of a fuel handling system, a power source, a turbine, a generator, a gear system, an electrical transmission system, and a transformer, and a self-organizing system for self-organizing at least one of (i) a storage operation of the data, (ii) a data collection operation of the sensors that provide the plurality of sensor inputs, and (iii) a selection operation of the plurality of sensor inputs.

In embodiments, the self-organizing system organizes a swarm of mobile data collectors to collect data from a plurality of target systems.

In embodiments, the self-organizing system generates a storage specification for organizing storage of the data, the storage specification specifying data for local storage in the power generation environment and specifying data for streaming via a network connection from the power generation environment.

The present disclosure describes a system for self-organizing collection and storage of data collection in an energy source extraction environment, the system according to one disclosed non-limiting embodiment of the present disclosure can include a data collector for handling a plurality of sensor inputs from sensors in the energy extraction environment, wherein the plurality of sensor inputs is configured to sense at least one of an operational mode, a fault mode, and a health status of at least one target system selected from a group consisting of a hauling system, a lifting system, a drilling system, a mining system, a digging system, a boring system, a material handling system, a conveyor system, a pipeline system, a wastewater treatment system, and a fluid pumping system, and a self-organizing system for self-organizing at least one of (i) a storage operation of the data, (ii) a data collection operation of the sensors that provide the plurality of sensor inputs, and (iii) a selection operation of the plurality of sensor inputs.

In embodiments, the self-organizing system organizes a swarm of mobile data collectors to collect data from a plurality of target systems.

In embodiments, the self-organizing system generates a storage specification for organizing storage of the data, the storage specification specifying data for local storage in the energy extraction environment and specifying data for streaming via a network connection from the energy extraction environment.

In embodiments, the energy source extraction environment is a coal mining environment.

In embodiments, the energy source extraction environment is a metal mining environment.

In embodiments, the energy source extraction environment is a mineral mining environment.

In embodiments, the energy source extraction environment is an oil drilling environment.

The present disclosure describes a system for self-organizing collection and storage of data collection in a manufacturing environment, the system according to one disclosed non-limiting embodiment of the present disclosure can include a data collector for handling a plurality of sensor inputs from sensors in the power generation environment, wherein the plurality of sensor inputs is configured to sense at least one of an operational mode, a fault mode, and a health status of at least one target system selected from a group consisting of a power system, a conveyor system, a generator, an assembly line system, a wafer handling system, a chemical vapor deposition system, an etching system, a printing system, a robotic handling system, a component assembly system, an inspection system, a robotic assembly system, and a semi-conductor production system, and a self-organizing system for self-organizing at least one of (i) a storage operation of the data, (ii) a data collection operation of the sensors that provide the plurality of sensor inputs, and (iii) a selection operation of the plurality of sensor inputs.

In embodiments, the self-organizing system organizes a swarm of mobile data collectors to collect data from a plurality of target systems.

In embodiments, the self-organizing system generates a storage specification for organizing the storage of the data, the storage specification specifying data for local storage in the manufacturing environment and specifying data for streaming via a network connection from the manufacturing environment.

The present disclosure describes a system for self-organizing collection and storage of data collection in a refining environment, the system according to one disclosed non-limiting embodiment of the present disclosure can include a data collector for handling a plurality of sensor inputs from sensors in the power generation environment, wherein the plurality of sensor inputs is configured to sense at least one of an operational mode, a fault mode and a health status of at least one target system selected from a group consisting of a power system, a pumping system, a mixing system, a reaction system, a distillation system, a fluid handling system, a heating system, a cooling system, an evaporation system, a catalytic system, a moving system, and a container system, and a self-organizing system for self-organizing at least one of (i) a storage operation of the data, (ii) a data collection operation of the sensors that provide the plurality of sensor inputs, and (iii) a selection operation of the plurality of sensor inputs.

In embodiments, the self-organizing system organizes a swarm of mobile data collectors to collect data from a plurality of target systems.

In embodiments, the self-organizing system generates a storage specification for organizing the storage of the data, the storage specification specifying data for local storage in the refining environment and specifying data for streaming via a network connection from the refining environment.

In embodiments, the refining environment is a chemical refining environment.

In embodiments, the refining environment is a pharmaceutical refining environment.

In embodiments, the refining environment is a biological refining environment.

In embodiments, the refining environment is a hydrocarbon refining environment.

The present disclosure describes a system for self-organizing collection and storage of data collection in a distribution environment, the system according to one disclosed non-limiting embodiment of the present disclosure can include a data collector for handling a plurality of sensor inputs from sensors in the distribution environment, wherein the plurality of sensor inputs is configured to sense at least one of an operational mode, a fault mode and a health status of at least one target system selected from a group consisting of a power system, a conveyor system, a robotic transport system, a robotic handling system, a packing system, a cold storage system, a hot storage system, a refrigeration system, a vacuum system, a hauling system, a lifting system, an inspection system, and a suspension system, and a self-organizing system for self-organizing at least one of (i) a storage operation of the data, (ii) a data collection operation of the sensors that provide the plurality of sensor inputs, and (iii) a selection operation of the plurality of sensor inputs.

In embodiments, the self-organizing system organizes a swarm of mobile data collectors to collect data from a plurality of target systems.

In embodiments, the self-organizing system generates a storage specification for organizing the storage of the data, the storage specification specifying data for local storage in the distribution environment and specifying data for streaming via a network connection from the distribution environment.

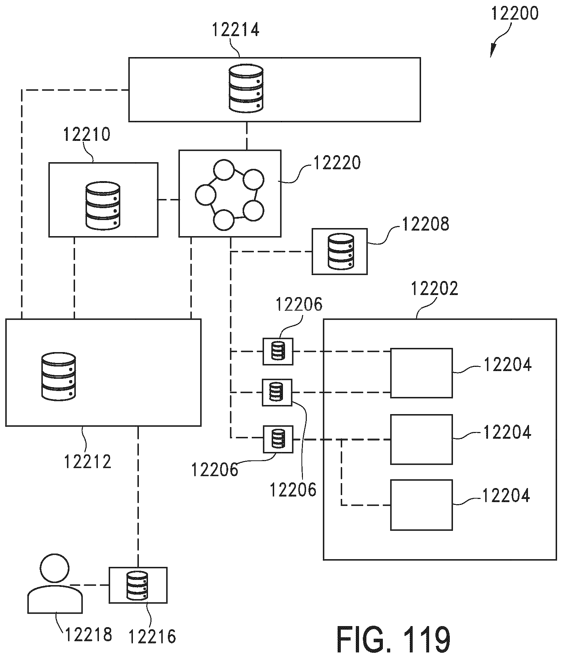

Referencing Figure 119, an example system 12200 for self-organized, network-sensitive data collection in an industrial environment is depicted. The system 12200 includes an industrial system 12202 having a number of components 12204, and a number of sensors 12206, wherein each of the sensors 12206 is operatively coupled to at least one of the components 12204. The selection, distribution, type, and communicative setup of sensors depends upon the application of the system 12200 and/or the context.

In certain embodiments, sensor data values 12204 are provided to a data collector 12208, which may be in communication with multiple sensors 12206 and/or with a controller 12212. In certain embodiments, a plant computer 12210 is additionally or alternatively present. In the example system, the controller 12212 is structured to functionally execute operations of the sensor communication circuit 12224, sensor data storage profile circuit 12226, sensor data storage implementation circuit 12228, storage planning circuit 12230, and/or haptic feedback circuit 12232. The controller 12212 is depicted as a separate device for clarity of description. Aspects of the controller 12212 may be present on the sensors 12206, the data controller 12208, the plant computer 12210, and/or on a cloud computing device 12214. In certain embodiments described throughout this disclosure, all aspects of the controller 12212 or other controllers may be present in another device depicted on the system 12200. The plant computer 12210 represents local computing resources, for example processing, memory, and/or network resources, that may be present and/or in communication with the industrial system 12200. In certain embodiments, the cloud computing device 12214 represents computing resources externally available to the industrial system 12202, for example over a private network, intra-net, through cellular communications, satellite communications, and/or over the internet. In certain embodiments, the data controller 12208 may be a computing device, a smart sensor, a MUX box, or other data collection device capable to receive data from multiple sensors and to pass-through the data and/or store data for later transmission. An example data controller 12208 has no storage and/or limited storage, and selectively passes sensor data therethrough, with a subset of the sensor data being communicated at a given time due to bandwidth considerations of the data controller 12208, a related network, and/or imposed by environmental constraints. In certain embodiments, one or more sensors and/or computing devices in the system 12200 are portable devices such as the user associated device 12216 associated with a user 12218, for example a plant operator walking through the industrial system may have a smart phone, which the system 12200 may selectively utilize as a data controller 12208, sensor 12206 - for example to enhance communication throughput, sensor resolution, and/or as a primary method for communicating sensor data values 12244 to the controller 12212. The system 12200 depicts the controller 12212, the sensors 12206, the data controller 12208, the plant computer 12210, and/or the cloud computing device 12214 having a memory storage for storing sensor data thereon, any one or more of which may not have a memory storage for storing sensor data thereon.

The example system 12200 further includes a mesh network 12220 having a plurality of network nodes depicted thereupon. The mesh network 12220 is depicted in a single location for convenience of illustration, but it will be understood that any network infrastructure that is within the system 12200, and/or within communication with the system 12200, including intermittently, is contemplated within the system network. Additionally, any or all of the cloud server 12214, plant computer 12210, controller 12212, data controller 12208, any network capable sensor 12206, and/or user associated device 12218 may be a part of the network for the system, including a mesh network 12220, during at least certain operating conditions of the system 12200. Additionally, or alternatively, the system 12200 may utilize a hierarchical network, a peer-to-peer network, a peer-to-peer network with one or more super-nodes, combinations of these, hybrids of these, and/or may include multiple networks within the system 12200 or in communication with the system. It will be appreciated that certain features and operations of the present disclosure are beneficial to only one or more than one of these types of networks, certain features and operations of the present disclosure are beneficial to any type of network, and certain features and operations are particularly beneficial to combinations of these networks, and/or to networks having multiple networking options within the network, where the benefits relate to the utilization of options of any type, or where the benefits relate to one or more options being of a specific network type.

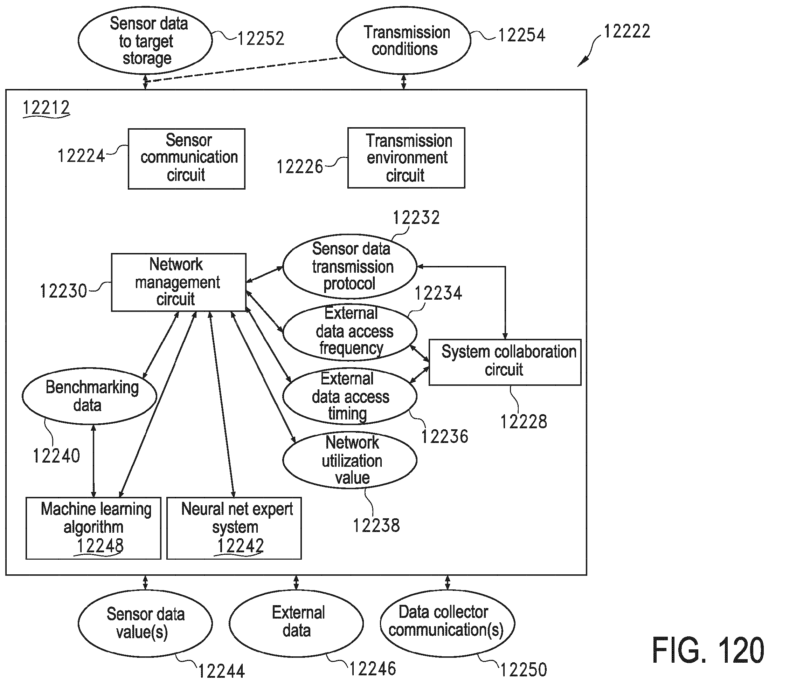

Referencing Figure 120, an example apparatus 12222 includes the controller 12212 having a sensor communication circuit 12224 that interprets a number of sensor data values 12244 from the number of sensors 12206 and a system collaboration circuit 12228 that communicates at least a portion of the number of sensor data values (e.g., sensor data 12244 to target storage 12252) to a storage target computing device according to a sensor data transmission protocol 12232. The target computing device includes any device in the system having memory that is the target location for the selected sensor data 12252. For example, the cloud server 12214, plant computer 12210, the user associated device 12218, and/or another portion of the controller 12212 that communicates with the sensor 12206 and/or data controller 12208 over the network of the system. The target computing device may be a short-term target (e.g., until a process operation is completed), a medium-term target (e.g., to be held until certain processing operations are completed on the data, and/or until a periodic data migration occurs), and/or a long-term target (e.g., to be held for the course of a data retention policy, and/or until a long-term data migration is planned), and/or the data storage target for an unknown period (e.g., data is passed to a cloud server 12214, whereupon the system 12200, in certain embodiments, does not maintain control of the data). In certain embodiments, the target computing device is the next computing device in the system planned to store the data. In certain embodiments, the target computing device is the next computing device in the system where the data will be moved, where such a move occurs across any aspect of the network of the system 12200.

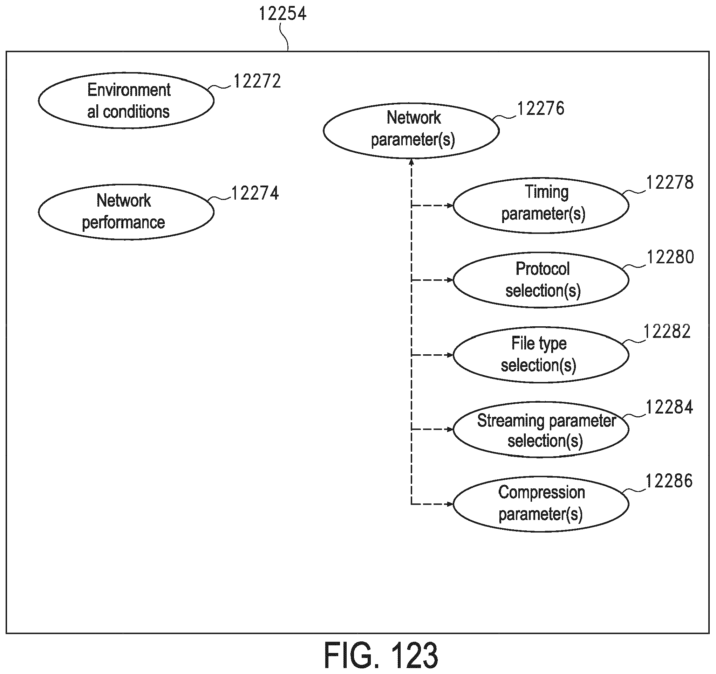

The example controller 12212 includes a transmission environment circuit 12226 that determines transmission conditions 12254 corresponding to the communication of the at least a portion of the number of sensor data values 12252 to the storage target computing device. Transmission conditions 12254 include any conditions affecting the transmission of the data. For example, referencing Figure 123, example and non-limiting transmission conditions 12254 are depicted including environmental conditions 12272 (e.g., EM noise, vibration, temperature, the presence and layout of devices or components affecting transmission, such as metal, conductive, or high density) including environmental conditions 12272 that affect communications directly, and environmental conditions 12272 that affect network devices such as routers, servers, transmitters/transceivers, and the like. An example transmission conditions 12254 includes a network performance 12274, such as the specifications of network equipment or nodes, specified limitations of network equipment or nodes (e.g., utilization limits, authorization for usage, available power, etc.), estimated limitations of the network (e.g., based on equipment temperatures, noise environment, etc.), and/or actual performance of the network (e.g., as observed directly such as by timing messages, sending diagnostic messages, or determining throughput, and/or indirectly by observing parameters such as memory buffers, arriving messages, etc. that tend to provide information about the performance of the network). Another example transmission condition 12254 includes network parameters 12276, such as timing parameters 12278 (e.g., clock speeds, message speeds, synchronous speeds, asynchronous speeds, and the like), protocol selections 12280 (e.g., addressing information, message sizes including administrative support bits within messages, and/or speeds supported by the protocols present or available), file type selections 12282 (e.g., data transfer file types, stored file types, and the network implications such as how much data must be transferred before data is at least partially readable, how to determine data is transferred, likely or supported file sizes, and the like), streaming parameter selections 12284 (e.g., streaming protocols, streaming speeds, priority information of streaming data, available nodes and/or computing devices to manage the streaming data, and the like), and/or compression parameters 12286 (e.g., compression algorithm and type, processing implications at each end of the message, lossy versus lossless compression, how much information must be passed prior to usable data being available, and the like).

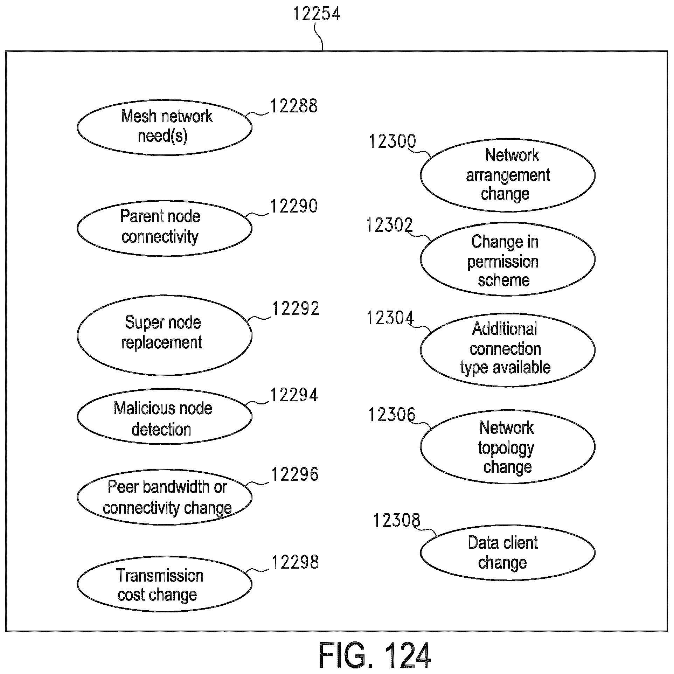

Referencing Figure 124, certain further non-limiting examples of transmission conditions 12254 corresponding to the communication of the sensor data 12252 are depicted. Example and non-limiting transmission conditions 12254 include a mesh network need 12288 (e.g., to rearrange the mesh to balance throughput), a parent node connectivity change 12290 in a hierarchically arranged network (e.g., the parent node has lost connectivity, re-gained connectivity, and/or has changed to a different set of child nodes and/or higher nodes), and/or a network super-node in a hybrid peer-to-peer application-layer network has been replaced 12292. A super-node, as utilized herein, is a node having additional capability from other peer-to-peer nodes. Such additional capability may be by design only - for example a super-node may connect in a different manner and/or to nodes outside of the peer-to-peer node system. In certain embodiments, the super-node may additionally or alternatively have more processing power, increased network speed or throughput access, and/or more memory (e.g., for buffering, caching, and/or short term storage) to provide more capability to meet the functions of the super-node.

An example transmission condition 12254 includes a node in a mesh or hierarchical network detected as malicious (e.g., from another supervisory process, heuristically, or as indicated to the system 12200); a peer node has experienced a bandwidth or connectivity change 12296 (e.g., mesh network peer that was forwarding packets has lost connectivity, gained additional bandwidth, had a reduction in available bandwidth, and/or has regained connectivity). An example transmission condition 12254 includes a change in a cost of transmitting information 12298 (e.g., cost has increased or decreased, where cost may be a direct cost parameter such as a data transmission subscription cost, or an abstracted cost parameter reflecting overall system priorities, and/or a current cost of delivering information over a network hop has changed), a change has been made in a hierarchical network arrangement (e.g., network arrangement change 12300) such as to balance bandwidth use in a network tree; and/or a change in a permission scheme 12302 (e.g., a portion of the network relaying sampling data has had a change in permissions, authorization level, or credentials). Certain further example transmission conditions 12254 include the availability of an additional connection type 12304 (e.g., a higher-bandwidth network connection type has become available, and/or a lower-cost network connection type has become available); a change has been made in a network topology 12306 (e.g., a node has gone offline or online, a mesh change has occurred, and/or a hierarchy change has occurred); and/or a data collection client changed a preference or a requirement 12308 (e.g., a data frequency requirement for at least one of the number of sensor values; a data type requirement for at least one of the number of sensor values; a sensor target for data collection; and/or a data collection client has changed the storage target computing device, which may change the network delivery outcomes and routing).

The example controller 12212 includes a network management circuit 12230 that updates the sensor data transmission protocol 12232 in response to the transmission conditions 12254. For example, where the transmission conditions 12254 indicate that a current routing, protocol, delivery frequency, delivery rate, and/or any other parameter associated with communicating the sensor data 12252 is no longer cost effective, possible, optimal, and/or where an improvement is available, the network management circuit 12230 updates the sensor data transmission protocol 12232 in response to a lower cost, possible, optimal, and/or improved transmission condition. The example system collaboration circuit 12228 is further responsive to the updated sensor data transmission protocol 12232 - for example, implementing subsequent communications of the sensor data 12252 in compliance with the updated sensor data transmission protocol 12232, providing a communication to the network management circuit 12230 indicating which aspects of the updated sensor data transmission protocol 12232 cannot be or are not being followed, and/or providing an alert (e.g., to an operator, a network node, controller 12212, and/or the network management circuit 12230) indicating that a change is requested, indicating that a change is being implemented, and/or indicating that a requested change cannot be or is not being implemented.

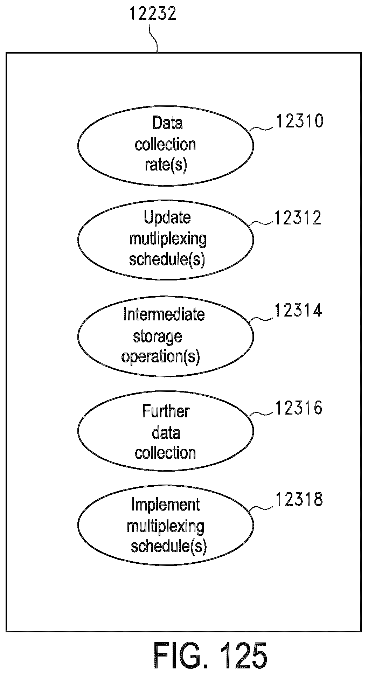

An example system 12200 includes the transmission conditions 12254 being environmental conditions 12272 relating to sensor communication of the number of sensor data values 12252, where the network management circuit 12230 further analyzes the environmental conditions 12272, and where updating the sensor data transmission protocol 12232 includes modifying the manner in which the number of sensor data values are transmitted from the number of sensors 12206 to the storage target computing device. An example system further includes a data collector 12208 communicatively coupled to at least a portion of the number of sensors 12206 and responsive to the sensor data transmission protocol 12232, where the system collaboration circuit 12228 further receives the number of sensor data values 12244 from the at least a portion of the number of sensors, and where the transmission conditions 12254 correspond to at least one network parameter corresponding to the communication of the number of sensor data values from the at least a portion of the number of sensors. Referencing Figure 125, a number of example sensor data transmission protocol 12232 values are depicted. An example sensor data transmission protocol 12232 value includes a data collection rate 12310 - for example a rate and/or a frequency at which a sensor 12206 transmits, provides, or samples data, and/or at which the data collector 12208 receives, passes along, stores, or otherwise captures sensor data. An example network management circuit 12230 further updates the sensor data transmission protocol 12232 to modify the data collector 12208 to adjust a data collection rate 12310 for at least one of the number of sensors. Another example sensor data transmission protocol 12232 value includes a multiplexing schedule 12312, which includes a data collector 12208 and/or a smart sensor configured to provide multiple sensor data values, such as in an alternating or other scheduled manner, and/or to package multiple sensor values into a single message in a configured manner. An example network management circuit 12230 updates the sensor data transmission protocol 12232 to modify a multiplexing schedule of the data collector 12208 and/or smart sensor. Another example sensor data transmission protocol 12232 value includes an intermediate storage operation 12314, where an intermediate storage is a storage at any location in the system at least one network transmission prior to the target storage computing device. Intermediate storage may be implemented as an on-demand operation, where a request of the data (e.g., from a user, a machine learning operation, or another system component) results in the subsequent transfer from the intermediate storage to the target computing device, and/or the intermediate storage may be implemented to time shift network communications to lower cost and/or lower network utilization times, and/or to manage moment-to-moment traffic on the network. The example network management circuit 12230 updates the sensor data transmission protocol 12232 to command an intermediate storage operation for at least a portion of the number of sensor data values, where the intermediate storage may be on a sensor, data collector, a node in the mesh network, on the controller, on a component, and/or in any other location within the system. An example sensor data transmission protocol 12232 includes a command for further data collection 12316 for at least a portion of the number of sensors - for example because a resolution, rate, and/or frequency of a sensor data provision is not sufficient for some aspect of the system, to provide additional data to a machine learning algorithm, and/or because a prior resource limitation is no longer applicable and further data from one or more sensors is now available. An example sensor data transmission protocol 12232 includes a command to implement a multiplexing schedule 12318 - for example where a data collector 12208 and/or smart sensor is capable to multiplex sensor data but does not do so under all operating conditions, or only does so in response to the multiplexing schedule 12318 of the sensor data transmission protocol 12232.

An example network management circuit 12230 further updates the sensor data transmission protocol 12232 to adjust a network transmission parameter (e.g., any network parameter 12276) for at least a portion of the number of sensor values. For example, certain network parameters that are not control variables and/or are not currently being controlled are transmission conditions 12254, and certain network parameters are control variables and subject to change in response to the data transmission protocol 12232, and/or the network management circuit 12230 can optionally take control of certain network parameters to make them control variables. An example network management circuit 12230 further updates the sensor data transmission protocol 12232 to change any one or more of: a frequency of data transmitted; a quantity of data transmitted; a destination of data transmitted (including a target or intermediate destination, and/or a routing); a network protocol used to transmit the data; and/or a network path (e.g., providing a redundant path to transmit the data (e.g., where high noise, high network loss, and/or critical data are involved, the network management circuit 12230 may determine that the system operations are improved with redundant pathing for some of the data)). An example network management circuit 12230 further updates the sensor data transmission protocol 12232, such as to: bond an additional network path to transmit the data (e.g., the network management circuit 12230 may have authority to bring additional network resources online, and/or selectively access additional network resources); re-arrange a hierarchical network to transmit the data (e.g., add or remove a hierarchy layer, change a parent-child relationship, etc., for example, to provide critical data with additional paths, fewer layers, and/or a higher priority path); rebalance a hierarchical network to transmit the data; and/or reconfigure a mesh network to transmit the data. An example network management circuit 12230 further updates the sensor data transmission protocol 12232 to delay a data transmission time, and/or delay the data transmission time to a lower cost transmission time.

An example network management circuit further updates the sensor data transmission protocol 12232 to reduce the amount of information sent at one time over the network and/or updates the sensor data transmission protocol to adjust a frequency of data sent from a second data collector (e.g., an offset data collector within or not within the direct purview of the network management circuit 12230, but where network resource utilization from the second data collector competes with utilization of the first data collector).

An example network management circuit 12230 further adjusts an external data access frequency 12234 - for example where the expert system 12242 and/or the machine learning algorithm 12248 access external data 12246 to make continuous improvements to the system (e.g., accessing information outside of the sensor data values 12244, and/or from offset systems or aggregated cloud based data), and/or an external data access timing (12236). The control of external data 12246 access allows for control of network utilization when the system is low on resources, when high fidelity and/or frequency of sensor data values 12244 is prioritized, and/or shifting of resource utilization into lower cost portions of the operating space of the system. In certain embodiments, the system collaboration circuit 12228 accesses the external data 12246, and is responsive to the adjusted external data access frequency 12234 and/or external data access timing value 12236. An example network management circuit 12230 further adjusts a network utilization value 12238 - for example to keep system utilization operations below a threshold to reserve margin and/or to avoid the need for capital cost upgrades to the system due to capacity limitations. An example network management circuit 12230 adjusts the network utilization value 12238 to utilize bandwidth at a lower cost bandwidth time - for example when competing traffic is lower, when network utilization does not adversely affect other system processes, and/or when power consumption costs are lower.

An example network management circuit further 12230 enables utilizing a high-speed network, and/or requests a higher cost bandwidth access, for example when system process improvements are sufficient that higher costs are justified, to meet a minimum delivery requirement for data, and/or to move aging data from the system before it becomes obsolete or must be deleted to make room for subsequent data.

An example network management circuit 12230 further includes an expert system 12242, where the updating the sensor data transmission protocol 12232 is further in response to operations of the expert system 12242. The self-organized, network-sensitive data collection system may manage or optimize any such parameters or factors noted throughout this disclosure, individually or in combination, using an expert system, which may involve a rule-based optimization, optimization based on a model of performance, and/or optimization using machine learning/artificial intelligence, optionally including deep learning approaches, or a hybrid or combination of the above. Referencing Figure 119, a number of non-limiting examples of expert systems 12242, any one or more of which may be present in embodiments having an expert system 12242. Without limitation to any other aspect of the present disclosure for expert systems, machine learning operations, and/or optimization routines, example expert systems 12242 include a rule-based system 12202 (e.g., seeded by rules based on modeling, expert input, operator experience, or the like); a model-based system 12204 (e.g., modeled responses or relationships in the system informing certain operations of the expert system, and/or working with other operations of the expert system); a neural-net system (e.g., including rules, state machines, decision trees, conditional determinations, and/or any other aspects); a Bayesian-based system 12208 (e.g., statistical modeling, management of probabilistic responses or relationships, and other determinations for managing uncertainty); a fuzzy logic-based system 12210 (e.g., determining fuzzification states for various system parameters, state logic for responses, and de-fuzzification of truth values, and/or other determinations for managing vague states of the system); and/or a machine learning system 12212 (e.g., recursive, iterative, or other long-term optimization or improvement of the expert system, including searching data, resolutions, sampling rates, etc. that are not within the scope of the expert system to determine if improved parameters are available that are not presently utilized), which may be in addition to or an embodiment of the machine learning algorithm 12248. Any aspect of the expert system 12242 may be re-calibrated, deleted, and/or added during operations of the expert system 12242, including in response to updated information learned by the system, provided by a user or operator, provided by the machine learning algorithm 12248, information from external data 12246 and/or from offset systems.

An example network management circuit 12230 further includes a machine learning algorithm 12248, where updating the sensor data transmission protocol 12232 is further in response to operations of the machine learning algorithm 12248. An example machine learning algorithm 12248 utilizes a machine learning optimization routine, and upon determining that an improved sensor data transmission protocol 12232 is available, the network management circuit 12230 provides the updated sensor data transmission protocol 12232 which is utilized by the system collaboration circuit 12228. In certain embodiments, the network management circuit 12230 may perform various operations such as supplying a sensor data transmission protocol 12232 which is utilized by the system collaboration circuit 12228 to produce real-world results, applies modeling to the system (either first principles modeling based on system characteristics, a model utilizing actual operating data for the system, a model utilizing actual operating data for an offset system, and/or combinations of these) to determine what an outcome of a given sensor data transmission protocol 12232 will be or would have been (including, for example, taking extra sensor data beyond what is utilized to support a process operated by the system, and/or utilizing external data 12246 and/or benchmarking data 12240), and/or applying randomized changes to the sensor data transmission protocol 12232 to ensure that an optimization routine does not settle into a local optimum or non-optimal condition.

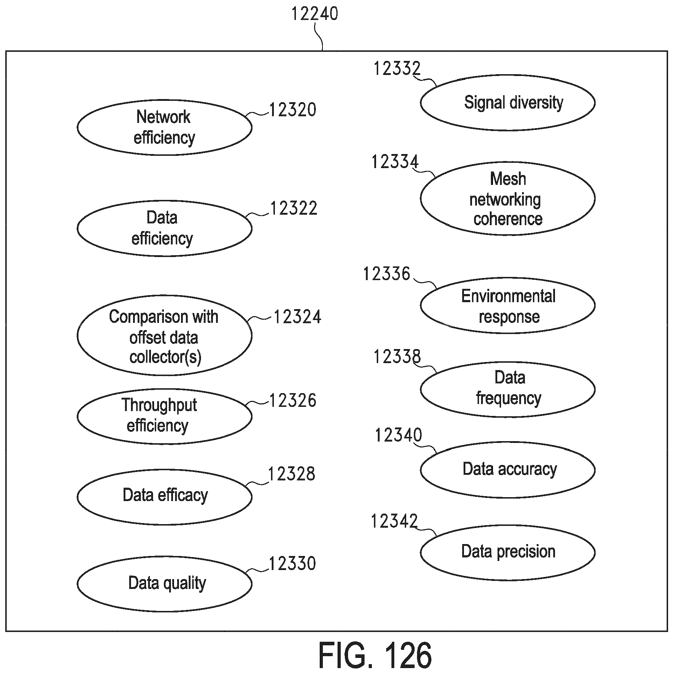

An example machine learning algorithm 12248 further utilizes feedback data including the transmission conditions 12254, at least a portion of the number of sensor values 12244; and/or where the feedback data includes benchmarking data 12240. Referencing Figure 126, non-limiting examples of benchmarking data 12240 are depicted. Benchmarking data 12240 may reference, generally, expected data (e.g., according to an expert system 12242, user input, prior experience, and/or modeling outputs), data from an offset system (including as adjusted for differences in the contemplated system 12200), aggregated data for similar systems (e.g., as external data 12246 which may be cloud-based), and the like. Benchmarking data may be relative to the entire system, the network, a node on the network, a data collector, and/or a single sensor or selected group of sensors. Example and non-limiting benchmarking data includes a network efficiency 12320 (e.g., throughput capability, power utilization, quality and/or integrity of communications relative to the infrastructure, load cycle, and/or environmental conditions of the system 12200), a data efficiency 12322 (e.g., a percentage of overall successful data captured relative to a target value, a description of data gaps relative to a target value, and/or may be focused on critical or prioritized data), a comparison with offset data collectors 12324 (e.g., comparing data collectors in the system having a similar environment, data collection responsibility, or other characteristic making the comparison meaningful), a throughput efficiency 12326 (e.g., a utilization of the available throughput, a variability indicator - such as high variability being an indication that a network may be oversized or have further transmission capability, or high variability being an indication that the network is responsive to cost avoidance opportunities - or both depending upon the further context which can be understood looking at other information such as why the utilization differences occur), a data efficacy 12328 (e.g., a determination that captured parameters are result effective, strong control parameters, and/or highly predictive parameters, and that efficacious data is taken at acceptable resolution, sampling rate, and the like), a data quality 12330 (e.g., degradation of the data due to noise, deconvolution errors, multiple calculation operations and rounding, compression, packet losses, etc.), a data precision 12342 (e.g., a determination that sufficiently precise data is taken, preserved during communications, and preserved during storage), a data accuracy 12340 (e.g., a determination that corrupted data, degradation through transmission and/or storage, and/or time lag results in data that is alone inaccurate, or inaccurate as applied in a time sequence or other configuration), a data frequency 12338 (e.g., a determination that data as communicated has sufficient time and/or frequency domain resolution to determine the responses of interest), an environmental response 12336 (e.g., environmental effects on the network are sufficiently managed to maintain other aspects of the data), a signal diversity 12332 (e.g., whether systematic gaps exist which increase the consequences of degradation - e.g., 1% of the data is missing, but it's s systematically a single critical sensor; do critical sensed parameters have multiple potential sources of information), a critical response (is data sufficient to detect critical responses, such as support for a sensor fusion operation and/or a pattern recognition operation), and/or a mesh networking coherence 12334 (e.g., keeping processors, nodes, and other network aspects together on a single view of applicable memory states).

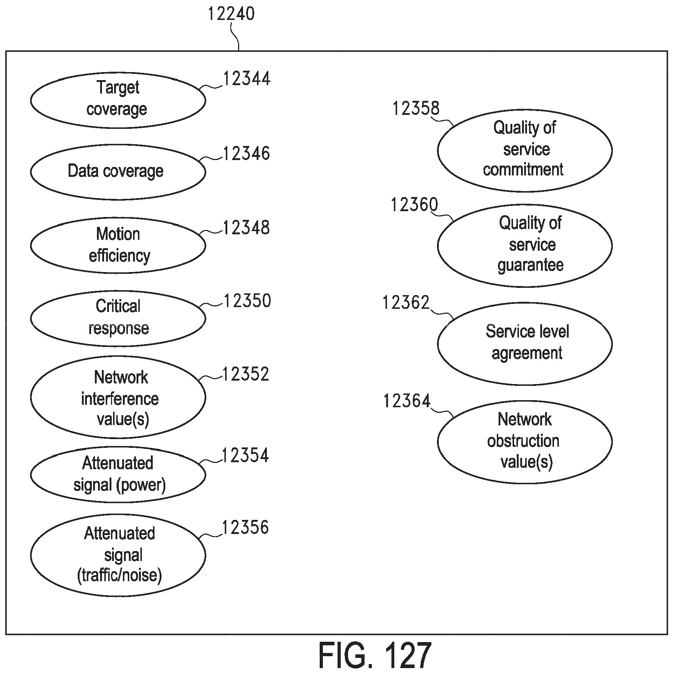

Referencing Figure 127, certain further non-limiting examples of benchmarking data 12240 are depicted. Example and non-limiting benchmarking data 12240 includes a data coverage 12346 (e.g., what fraction of the desired data, critical data, etc. was successfully communicated and captured; how is the data distributed throughout the system), a target coverage 12344 (e.g., does a component or process of the system have sufficient time and spatial resolution of sensed values), a motion efficiency 12348 (e.g., reflecting an amount of time, number of steps, or extent of motion required to accomplish a given result, such as where an action is required by a human operator, robotic element, drone, or the like to accomplish an action), a quality of service commitment 12358 (e.g., an agreement, formal or informal commitment, and/or best practice quality of service such as maximum data gaps, minimum up-times, minimum percentages of coverage), a quality of service guarantee 12360 (e.g., a formal agreement to a quality of service with known or modeled consequences that can act in a cost function, etc.), a service level agreement 12362 (e.g., minimum uptimes, data rates, data resolutions, etc., which may be driven by industry practices, regulatory requirements, and/or formal agreements that certain parameters, detection for certain components, or detection for certain processes in the system will meet data delivery requirements in type, resolution, sample rate, etc.), a predetermined quality of service value (e.g., a user-defined value, a policy for the operator of the system, etc.), and/or a network obstruction value 12364. Example and non-limiting network obstruction values 12364 include a network interference value (e.g., environmental noise, traffic on the network, collisions, etc.), a network obstruction value (e.g., a component, operation, and/or object obstructing wireless or wired communication in a region of the network, or over the entire network), and/or an area of impeded network connectivity (e.g., loss of connectivity for any reason, which may be normal at least intermittently during operations, or power loss, movement of objects through the area, movement of a network node through the area (e.g., a smart phone being utilized as a node), etc.). In certain embodiments, a network obstruction value 12364 may be caused by interference from a component of the system, an interference caused by one or more of the sensors (e.g., due to a fault or failure, or operation outside an expected range), interference caused by a metallic (or other conductive) object, interference caused by a physical obstruction (e.g., a dense object blocking or reducing transparency to wireless transmissions); an attenuated signal caused by a low power condition (e.g., a brown-out, scheduled power reduction, low battery, etc.); and/or an attenuated signal caused by a network traffic demand in a portion of the network (e.g., a node or group of nodes has high traffic demand during operations of the system).

Yet another example system includes an industrial system including a number of components, and a number of sensors each operatively coupled to at least one of the number of components; a sensor communication circuit that interprets a number of sensor data values from the number of sensors; a system collaboration circuit that communicates at least a portion of the number of sensor data values over a network having a number of nodes to a storage target computing device according to a sensor data transmission protocol; a transmission environment circuit that determines transmission feedback corresponding to the communication of the at least a portion of the number of sensor data values over the network; and a network management circuit updates the sensor data transmission protocol in response to the transmission feedback. The example system collaboration circuit is further responsive to the updated sensor data transmission protocol.

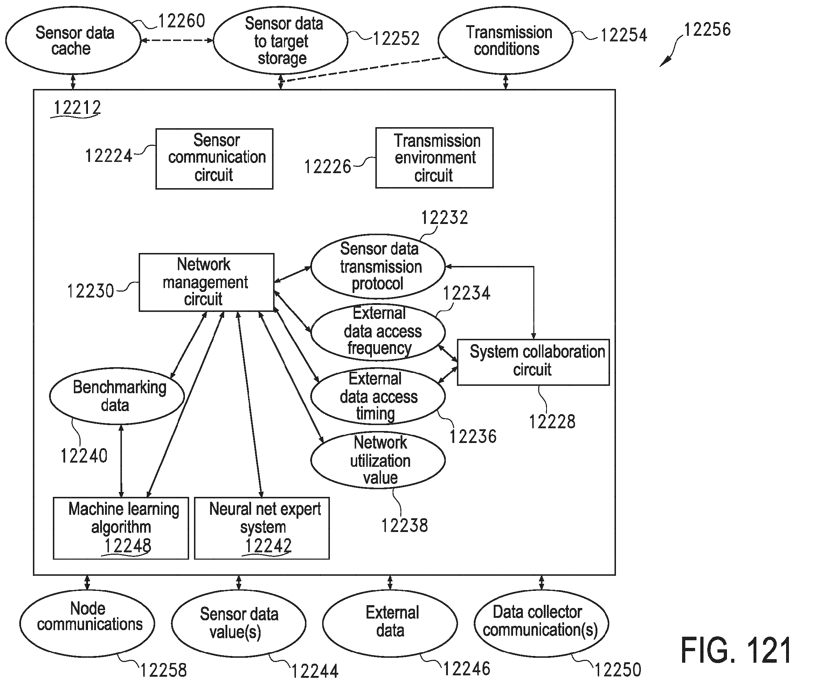

Referencing Figure 121, an example apparatus 12256 for self-organized, network-sensitive data collection in an industrial environment for an industrial system having a network with a number of nodes is depicted. In addition to the aspects of apparatus 12222, apparatus 12256 includes the system collaboration circuit 12228 further sending an alert to at least one of the number of nodes (e.g., as a node communication 12258) in response to the updated sensor data transmission protocol 12232. In certain embodiments, updating the sensor data transmission protocol 12232 includes the network management circuit 12230 including node control instructions, such as providing instructions to rearrange a mesh network including the number of nodes, providing instructions to rearrange a hierarchical data network including the number of nodes, rearranging a peer-to-peer data network including the number of nodes, rearranging a hybrid peer-to-peer data network including the number of nodes. In certain embodiments, the system collaboration circuit 12228 provides node control instructions as one or more node communications 12258.

In certain embodiments, updating the sensor data transmission protocol 12232 includes the network management circuit 12230 providing instructions to reduce a quantity of data sent over the network; providing instructions to adjust a frequency of data capture sent over the network; providing instructions to time-shift delivery of at least a portion of the number of sensor values sent over the network (e.g., utilizing intermediate storage); providing instructions to change a network protocol corresponding to the network; providing instructions to reduce a throughput of at least one device coupled to the network; providing instructions to reduce a bandwidth use of the network; providing instructions to compress data corresponding to at least a portion of the number of sensor values sent over the network; providing instructions to condense data corresponding to at least a portion of the number of sensor values sent over the network (e.g., providing a relevant subset, reduced sample rate data, etc.); providing instructions to summarize data (e.g., providing a statistical description, an aggregated value, etc.) corresponding to at least a portion of the number of sensor values sent over the network; providing instructions to encrypt data corresponding to at least a portion of the number of sensor values sent over the network (e.g., to enable using an alternate, less secure network path, and/or to access another network path requiring encryption); providing instructions to deliver data corresponding to at least a portion of the number of sensor values to a distributed ledger; providing instructions to deliver data corresponding to at least a portion of the number of sensor values to a central server (e.g., the plant computer 12210 and/or cloud server 12214); providing instructions to deliver data corresponding to at least a portion of the number of sensor values to a super-node; and providing instructions to deliver data corresponding to at least a portion of the number of sensor values redundantly across a number of network connections. In certain embodiments, updating the sensor data transmission includes providing instructions to deliver data corresponding to at least a portion of the number of sensor values to one of the components (e.g., where one or more components 12204 in the system has memory storage and is communicatively accessible to the sensor 12206, the data collector 12208, and/or the network), and/or where the one of the components is communicatively coupled to the sensor providing the data corresponding to at least a portion of the number of sensor values (e.g., where the data to be stored on the component 12204 is the component the data was measured for, or is in proximity to the sensor 12206 taking the data).

An example network includes a mesh network where the network management circuit 12230 further updates the sensor data transmission protocol 12232 to provide instructions to eject (e.g., remove from the mesh map, take it out of service, etc.) one of the number of nodes from the mesh network. An example network includes a peer-to-peer network, where the network management circuit 12230 further updates the sensor data transmission protocol 12232 to provide instructions to eject one of the number of nodes from the peer-to-peer network.

An example network management circuit 12230 further updates the sensor data transmission protocol 12232 to cache (e.g., as a sensor data cache 12260) at least a portion of the number of sensor values 12252. In certain further embodiments, the network management circuit 12230 further updates the sensor data transmission protocol 12232 to communicate the cached sensor values 12260 in response to at least one of: a determination that the cached data is requested (e.g., a user, model, machine learning algorithm, expert system, etc. has requested the data); a determination that the network feedback indicates communication of the cached data is available (e.g., a prior limitation on the network leading the network management circuit 12230 to direct caching is now lifted or improved); and/or a determination that higher priority data is present that requires utilization of cache resources holding the cached data 12260.

An example system 12200 for self-organized, network-sensitive data collection in an industrial environment includes an industrial system 12202 having a number of components 12204 and a number of sensors 12206 each operatively coupled to at least one of the number of components 12204. A sensor communication circuit 12224 interprets the number of sensor data values 12244 from the number of sensors at a predetermined frequency. The system collaboration circuit 12228 that communicates at least a portion of the number of sensor data values 12252 over a network having a number of nodes to a storage target computing device according to the sensor data transmission protocol 12232, where the sensor data transmission protocol 12232 includes a predetermined hierarchy of data collection and the predetermined frequency. An example data management circuit 12230 adjusts the predetermined frequency in response to transmission conditions 12254, and/or in response to benchmarking data 12240.

An example system 12200 for self-organized, network-sensitive data collection in an industrial environment includes an industrial system 12202 having a number of components 12204, and a number of sensors 12206 each operatively coupled to at least one of the number of components 12204. The sensor communication circuit 12224 interprets a number of sensor data values 12244 from the number of sensors 12206 at a predetermined frequency, and the system collaboration circuit 12228 communicates at least a portion of the number of sensor data values 12252 over a network having a number of nodes to a storage target computing device according to a sensor data transmission protocol. A transmission environment circuit 12226 determines transmission feedback (e.g., transmission conditions 12254) corresponding to the communication of the at least a portion of the number of sensor data values 12252 over the network. A network management circuit 12230 updates the sensor data transmission protocol 12232 in response to the transmission feedback 12254, and a network notification circuit 12268 provides an alert value 12264 in response to the updated sensor data transmission protocol 12232. Example alert values 12264 include a notification to an operator, a notification to a user, a notification to a portable device associated with a user, a notification to a node of the network, a notification to a cloud computing device, a notification to a plant computing device, and/or a provision of the alert as external data to an offset system. Example and non-limiting alert conditions include a component of the system operating in a fault condition, a process of the system operating in a fault condition, a commencement of the utilization of cache storage and/or intermediate storage for sensor values due to a network communication limit, a change in the sensor data transmission protocol (including changes of a selected type), and/or a change in the sensor data transmission protocol that may result in loss of data fidelity or resolution (e.g., compression of data, condensing of data, and/or summarizing data).

An example transmission feedback includes a feedback value such as: a change in transmission pricing, a change in storage pricing, a loss of connectivity, a reduction of bandwidth, a change in connectivity, a change in network availability, a change in network range, a change in wide area network (WAN) connectivity, and/or a change in wireless local area network (WLAN) connectivity.

An example system includes an assembly line industrial system having a number of vibrating components, such as motors, conveyors, fans, and/or compressors. The system includes a number of sensors that determine various parameters related to the vibrating components, including determination of diagnostic and/or process related information (proper operation, off-nominal operation, operating speed, imminent servicing or failure, etc.) of one or more of the components. Example sensors, without limitation, include noise, vibration, acceleration, temperature, and/or shaft speed sensors. The sensor information is conveyed to a target storage system, including at least partially through a network communicatively coupled to the assembly line industrial system. The example system includes a network management circuit that determines a sensor data transmission protocol to control flow of data from the sensors to the target storage system. The network management circuit, a related expert system, and/or a related machine learning algorithm, updates the sensor data transmission protocol to ensure efficient network utilization, sufficient delivery of data to support system control, diagnostics, and/or other determinations planned for the data outside of the system, to reduce resource utilization of data transmission, and/or to respond to system noise factors, variability, and/or changes in the system or related aspects such as cost or environment parameters. The example system includes improvement of system operations to ensure that diagnostics, controls, or other data dependent operations can be completed, to reduce costs while maintaining performance, and/or to increase system capability over time or process cycles.

An example system includes an automated robotic handling system, including a number of components such as actuators, gear boxes, and/or rail guides. The system includes a number of sensors that determine various parameters related to the components, including without limitation actuator position and/or feedback sensors, vibration, acceleration, temperature, imaging sensors, and/or spatial position sensors (e.g., within the handling system, a related plant, and/or GPS-type positioning). The sensor information is conveyed to a target storage system, including at least partially through a network communicatively coupled to the automated robotic handling system. The example system includes a network management circuit that determines a sensor data transmission protocol to control flow of data from the sensors to the target storage system. The network management circuit, a related expert system, and/or a related machine learning algorithm, updates the sensor data transmission protocol to ensure efficient network utilization, sufficient delivery of data to support system control, diagnostics, improvement and/or efficiency updates to handling efficiency, and/or other determinations planned for the data outside of the system, to reduce resource utilization of data transmission, and/or to respond to system noise factors, variability, and/or changes in the system or related aspects such as cost or environment parameters. The example system includes improvement of system operations to ensure that diagnostics, controls, or other data dependent operations can be completed, to reduce costs while maintaining performance, and/or to increase system capability over time or process cycles.

An example system includes a mining operation, including a surface and/or underground mining operation. The example mining operation includes components such as an underground inspection system, pumps, ventilation, generators and/or power generation, gas composition or quality systems, and/or process stream composition systems (e.g., including determination of desired material compositions, and/or composition of effluent streams for pollution and/or regulatory control). Various sensors are present in an example system to support control of the operation, determine status of the components, support safe operation, and/or to support regulatory compliance. The sensor information is conveyed to a target storage system, including at least partially through a network communicatively coupled to the mining operation. In certain embodiments, the network infrastructure of the mining operation exhibits high variability, due to, without limitation, significant environmental variability (e.g., pit or shaft condition variability) and/or intermittent availability - e.g., shutting off electronics during certain mining operations, difficulty in providing network access to portions of the mining operation, and/or the desirability to include mobile or intermittently available devices within the network infrastructure. The example system includes a network management circuit that determines a sensor data transmission protocol to control flow of data from the sensors to the target storage system. The network management circuit, a related expert system, and/or a related machine learning algorithm, updates the sensor data transmission protocol to ensure efficient network utilization, sufficient delivery of data to support system control, diagnostics, improvement and/or efficiency updates to handling efficiency, support for financial and/or regulatory compliance, and/or other determinations planned for the data outside of the system, to reduce resource utilization of data transmission, and/or to respond to system noise factors, variability, network infrastructure challenges, and/or changes in the system or related aspects such as cost or environment parameters.

An example system includes an aerospace system, such as a plane, helicopter, satellite, space vehicle or launcher, orbital platform, and/or missile. Aerospace systems have numerous systems supported by sensors, such as engine operations, control surface status and vibrations, environmental status (internal and external), and telemetry support. Additionally, aerospace systems have high variability in both the number of sensors of varying types (e.g., a small number of fuel pressure sensors, but a large number of control surface sensors) as well as the sampling rates for relevant determinations of sensors of varying types (e.g., 1-second data may be sufficient for internal cabin pressure, but weather radar or engine speed sensors may require much higher time resolution). Computing power on an aerospace application is at a premium due to power consumption and weight considerations, and accordingly iterative, recursive, deep learning, expert system, and/or machine learning operations to improve any systems on the aerospace system, including sensor data taking and transmission of sensor information, are driven in many embodiments to computing devices outside of the aerospace vehicle of the system (e.g., through offline learning, post-processing, or the like). Storage capacity on an aerospace application is similarly at a premium, such that long-term storage of sensor data on the aerospace vehicle is not a cost-effective solution for many embodiments. Additionally, network communication from an aerospace vehicle may be subject to high variability and/or bandwidth limitations as the vehicle moves rapidly through the environment and/or into areas where direct communication with ground-based resources is not practical. Further, certain aerospace applications have significant competition for available network resources - for example in environments with a large number of passengers where passenger utilization of a network infrastructure consumes significant bandwidth. Accordingly, it can be seen that operations of a network management circuit, a related expert system, and/or a related machine learning algorithm, to update the sensor data transmission protocol can significantly enhance sensing operations in various aerospace systems. Additionally, certain aerospace applications have a high number of offset systems, enhancing the ability of an expert system or machine learning algorithm to improve sensor data capture and transmission operations, and/or to manage the high variability in sensed parameters (frequency, data rate, and/or data resolution) for the system across operating conditions.

An example system includes an oil or gas production system, such as a production platform (onshore or offshore), pumps, rigs, drilling equipment, blenders, and the like. Oil and gas production systems exhibit high variability in sensed variable types and sensing parameters, such as vibration (e.g., pumps, rotating shafts, fluid flow through pipes, etc. - which may be high frequency or low frequency), gas composition (e.g., of a wellhead area, personnel zone, near storage tanks, etc. - where low frequency may typically be acceptable, and/or it may be acceptable that no data is taken during certain times such as when personnel are not present), and/or pressure values (which may vary significantly both in required resolution and frequency or sampling rate depending upon operations currently occurring in the system). Additionally, oil and gas production systems have high variability in network infrastructure, both according to the system (e.g., an offshore platform versus a long-term ground-based production facility) and according to the operations being performed by the system (e.g., a wellhead in production may have limited network access, while a drilling or fracturing operation may have significant network infrastructure at a site during operations). Accordingly, it can be seen that operations of a network management circuit, a related expert system, and/or a related machine learning algorithm, to update the sensor data transmission protocol can significantly enhance sensing operations in various oil or gas production systems.

The present disclosure describes system for self-organized, network-sensitive data collection in an industrial environment, the system according to one disclosed non-limiting embodiment of the present disclosure can include an industrial system including a plurality of components, and a plurality of sensors each operatively coupled to at least one of the plurality of components, a sensor communication circuit structured to interpret a plurality of sensor data values from the plurality of sensors, a system collaboration circuit structured to communicate at least a portion of the plurality of sensor data values to a storage target computing device according to a sensor data transmission protocol, a transmission environment circuit structured to determine transmission conditions corresponding to the communication of the at least a portion of the plurality of sensor data values to the storage target computing device, a network management circuit structured to update the sensor data transmission protocol in response to the transmission conditions, and wherein the system collaboration circuit is further responsive to the updated sensor data transmission protocol.

In embodiments, the transmission conditions include environmental conditions relating to sensor communication of the plurality of sensor data values, and wherein the network management circuit is further structured to analyze the environmental conditions, and wherein updating the sensor data transmission protocol includes modifying the manner in which the plurality of sensor data values is transmitted from the plurality of sensors to the storage target computing device.

In embodiments, a data collector communicatively coupled to at least a portion of the plurality of sensors and responsive to the sensor data transmission protocol, wherein the system collaboration circuit is structured to receive the plurality of sensor data values from the at least a portion of the plurality of sensors, and wherein the transmission conditions correspond to at least one network parameter corresponding to the communication of the plurality of sensor data values from the at least a portion of the plurality of sensors.

In embodiments, the network management circuit is further structured to update the sensor data transmission protocol to modify the data collector to adjust a data collection rate for at least one of the plurality of sensors.

In embodiments, the network management circuit is further structured to update the sensor data transmission protocol to modify a multiplexing schedule of the data collector.

In embodiments, the network management circuit is further structured to update the sensor data transmission protocol to command an intermediate storage operation for at least a portion of the plurality of sensor data values.

In embodiments, the network management circuit is further structured to update the sensor data transmission protocol to command further data collection for at least a portion of the plurality of sensors.

In embodiments, the network management circuit is further structured to update the sensor data transmission protocol to modify the data collector to implement a multiplexing schedule.

In embodiments, the network management circuit is further structured to update the sensor data transmission protocol to adjust a network transmission parameter for at least a portion of the plurality of sensor values.

In embodiments, the adjusted network transmission parameter includes at least one parameter selected from the parameters consisting of a timing parameter, a protocol selection, a file type selection, a streaming parameter selection, and a compression parameter.

In embodiments, the network management circuit is further structured to update the sensor data transmission protocol to change a frequency of data transmitted.

In embodiments, the network management circuit is further structured to update the sensor data transmission protocol to change a quantity of data transmitted.

In embodiments, the network management circuit is further structured to update the sensor data transmission protocol to change a destination of data transmitted.

In embodiments, the network management circuit is further structured to update the sensor data transmission protocol to change a network protocol used to transmit the data.

In embodiments, the network management circuit is further structured to update the sensor data transmission protocol to add a redundant network path to transmit the data.

In embodiments, the network management circuit is further structured to update the sensor data transmission protocol to bond an additional network path to transmit the data.

In embodiments, the network management circuit is further structured to update the sensor data transmission protocol to re-arrange a hierarchical network to transmit the data.

In embodiments, the network management circuit is further structured to update the sensor data transmission protocol to rebalance a hierarchical network to transmit the data.

In embodiments, the network management circuit is further structured to update the sensor data transmission protocol to reconfigure a mesh network to transmit the data.

In embodiments, the network management circuit is further structured to update the sensor data transmission protocol to delay a data transmission time.

In embodiments, the network management circuit is further structured to update the sensor data transmission protocol to delay the data transmission time to a lower cost transmission time.

In embodiments, the network management circuit is further structured to update the sensor data transmission protocol to reduce the amount of information sent at one time over the network.

In embodiments, the network management circuit is further structured to update the sensor data transmission protocol to adjust a frequency of data sent from a second data collector.

In embodiments, the network management circuit is further structured to adjust an external data access frequency, and wherein the system collaboration circuit is responsive to the adjusted external data access frequency.

In embodiments, the network management circuit is further structured to adjust an external data access timing value, and wherein the system collaboration circuit is responsive to the adjusted external data access timing value.

In embodiments, the network management circuit is further structured to adjust a network utilization value.

In embodiments, the network management circuit is further structured to adjust the network utilization value to utilize bandwidth at a lower cost bandwidth time.

In embodiments, the network management circuit is further structured to enable utilizing a high-speed network.

In embodiments, the network management circuit is further structured to request a higher cost bandwidth access, and to update the sensor transmission protocol in response to the higher cost bandwidth access.

In embodiments, the network management circuit further includes an expert system, and wherein the updating the sensor data transmission protocol is further in response to operations of the expert system.

In embodiments, the network management circuit further includes a machine learning algorithm, and wherein the updating the sensor data transmission protocol is further in response to operations of the machine learning algorithm.

In embodiments, the machine learning algorithm is further structured to utilize feedback data including the transmission conditions.

In embodiments, the feedback data further includes at least a portion of the plurality of sensor values.

In embodiments, the feedback data further includes benchmarking data.

In embodiments, the benchmarking data further includes data selected from the list consisting of: a network efficiency, a data efficiency, a comparison with offset data collectors, a throughput efficiency, a data efficacy, a data quality, a data precision, a data accuracy, and a data frequency.

In embodiments, the benchmarking data further includes data selected from the list consisting of: an environmental response, a mesh networking coherence, a data coverage, a target coverage, a signal diversity, a critical response, and a motion efficiency.

In embodiments, the transmission conditions corresponding to the communication comprise at least one condition selected from the conditions consisting of a mesh network needs to rearrange to balance throughput, a parent node in a hierarchically arranged network has had a change in connectivity, a network super-node in a hybrid peer-to-peer application-layer network has been replaced, and a node in a mesh or hierarchical network has been detected as malicious.

In embodiments, the transmission conditions corresponding to the communication comprise at least one condition selected from the conditions consisting of a mesh network peer forwarding packets has lost connectivity, a mesh network peer forwarding packets has gained additional bandwidth, a mesh network peer forwarding packets has had a reduction in bandwidth, and a mesh network peer forwarding packets has regained connectivity.

In embodiments, the transmission conditions corresponding to the communication comprise at least one condition selected from the conditions consisting of a cost of transmitting information has changed dynamically, a change has been made in a hierarchical network arrangement to balance bandwidth use in a network tree, a portion of the network relaying sampling data has had a change in permissions, authorization level, or credentials, a current cost of delivering information over a network hop has changed, a higher-bandwidth network connection type has become available, a lower-cost network connection type has become available, and a change has been made in a network topology.

In embodiments, the transmission conditions corresponding to the communication include at least one condition selected from the conditions consisting of a data collection client has changed a data frequency requirement for at least one of the plurality of sensor values, a data collection client has changed a data type requirement for at least one of the plurality of sensor values, a data collection client has changed a sensor target for data collection, and a data collection client has changed the storage target computing device.

The present disclosure describes system for self-organized, network-sensitive data collection in an industrial environment, the system according to one disclosed non-limiting embodiment of the present disclosure can include an industrial system including a plurality of components, and a plurality of sensors each operatively coupled to at least one of the plurality of components, a sensor communication circuit structured to interpret a plurality of sensor data values from the plurality of sensors, a system collaboration circuit structured to communicate at least a portion of the plurality of sensor data values over a network having a plurality of nodes to a storage target computing device according to a sensor data transmission protocol, a transmission environment circuit structured to determine transmission feedback corresponding to the communication of the at least a portion of the plurality of sensor data values over the network, and a network management circuit structured to update the sensor data transmission protocol in response to the transmission feedback, wherein the system collaboration circuit is further responsive to the updated sensor data transmission protocol.

In embodiments, the system collaboration circuit is further structured to send an alert to at least one of the plurality of nodes in response to the updated sensor data transmission protocol.

In embodiments, updating the sensor data transmission includes at least one operation selected from the operations consisting of providing instructions to rearrange a mesh network including the plurality of nodes, providing instructions to rearrange a hierarchical data network including the plurality of nodes, rearranging a peer-to-peer data network including the plurality of nodes and rearranging a hybrid peer-to-peer data network including the plurality of nodes.

In embodiments, updating the sensor data transmission includes at least one operation selected from the operations consisting of providing instructions to reduce a quantity of data sent over the network, providing instructions to adjust a frequency of data capture sent over the network, providing instructions to time-shift delivery of at least a portion of the plurality of sensor values sent over the network, and providing instructions to change a network protocol corresponding to the network.

In embodiments, updating the sensor data transmission includes at least one operation selected from the operations consisting of providing instructions to reduce a throughput of at least one device coupled to the network, providing instructions to reduce a bandwidth use of the network, providing instructions to compress data corresponding to at least a portion of the plurality of sensor values sent over the network, providing instructions to condense data corresponding to at least a portion of the plurality of sensor values sent over the network, providing instructions to summarize data corresponding to at least a portion of the plurality of sensor values sent over the network, and providing instructions to encrypt data corresponding to at least a portion of the plurality of sensor values sent over the network.

In embodiments, updating the sensor data transmission includes at least one operation selected from the operations consisting of providing instructions to deliver data corresponding to at least a portion of the plurality of sensor values to a distributed ledger, providing instructions to deliver data corresponding to at least a portion of the plurality of sensor values to a central server, providing instructions to deliver data corresponding to at least a portion of the plurality of sensor values to a super-node and providing instructions to deliver data corresponding to at least a portion of the plurality of sensor values redundantly across a plurality of network connections.

In embodiments, updating the sensor data transmission includes providing instructions to deliver data corresponding to at least a portion of the plurality of sensor values to one of the plurality of components.

In embodiments, the one of the plurality of components is communicatively coupled to the sensor providing the data corresponding to at least a portion of the plurality of sensor values.

In embodiments, the system collaboration circuit is further structured to interpret a quality of service commitment, and wherein the network management circuit is further structured to update the sensor data transmission protocol further in response to the quality of service commitment.

In embodiments, the system collaboration circuit is further structured to interpret a service level agreement, and wherein the network management circuit is further structured to update the sensor data transmission protocol further in response to the service level agreement.

In embodiments, the network management circuit is further structured to update the sensor data transmission protocol to provide instructions to increase a quality of service value.

In embodiments, the network includes a mesh network, and wherein the network management circuit is further structured to update the sensor data transmission protocol to provide instructions to eject one of the plurality of nodes from the mesh network.

In embodiments, the network includes a peer-to-peer network, and wherein the network management circuit is further structured to update the sensor data transmission protocol to provide instructions to eject one of the plurality of nodes from the peer-to-peer network.

In embodiments, the network management circuit is further structured to update the sensor data transmission protocol to cache at least a portion of the plurality of sensor values.

In embodiments, the network management circuit is further structured to update the sensor data transmission protocol to communicate the cached at least a portion of the plurality of sensor values in response to at least one of a determination that the cached data is requested, a determination that the network feedback indicates communication of the cached data is available, and a determination that higher priority data is present that requires utilization of cache resources holding the cached data.

In embodiments, the system further includes a data collector configured to receive the at least a portion of the plurality of sensor data values, wherein the at least a portion of the plurality of sensor data values includes data provided by a plurality of the sensors, and wherein the transmission feedback includes network performance information corresponding to the data collector.

In embodiments, the system further includes a data collector configured to receive the at least a portion of the plurality of sensor data values, wherein the at least a portion of the plurality of sensor data values includes data provided by a plurality of the sensors, a second data collector communicatively coupled to the network, and wherein the transmission feedback includes network performance information corresponding to the second data collector.

The present disclosure describes system for self-organized, network-sensitive data collection in an industrial environment, the system according to one disclosed non-limiting embodiment of the present disclosure can include an industrial system including a plurality of components, and a plurality of sensors each operatively coupled to at least one of the plurality of components, a sensor communication circuit structured to interpret a plurality of sensor data values from the plurality of sensors at a predetermined frequency, a system collaboration circuit structured to communicate at least a portion of the plurality of sensor data values over a network having a plurality of nodes to a storage target computing device according to a sensor data transmission protocol, the sensor data transmission protocol including a predetermined hierarchy of data collection and the predetermined frequency, a transmission environment circuit structured to determine transmission feedback corresponding to the communication of the at least a portion of the plurality of sensor data values over the network, and a network management circuit structured to update the sensor data transmission protocol in response to the transmission feedback and further in response to benchmarking data, wherein the system collaboration circuit is further responsive to the updated sensor data transmission protocol.

In embodiments, updating the sensor data transmission includes at least one operation selected from the operations consisting of providing an instruction to change the sensors of the plurality of sensors, providing an instruction to adjust the predetermined frequency, providing an instruction to adjust a quantity of the plurality of sensor data values that are stored, providing an instruction to adjust a data transmission rate of the communication of the at least a portion of the plurality of sensor data values, providing an instruction to adjust a data transmission time of the communication of the at least a portion of the plurality of sensor data values, and providing an instruction to adjust a networking method of the communication over the network.

In embodiments, the benchmarking data further includes data selected from the list consisting of a network efficiency, a data efficiency, a comparison with offset data collectors, a throughput efficiency, a data efficacy, a data quality, a data precision, a data accuracy, and a data frequency.

In embodiments, the benchmarking data further includes data selected from the list consisting of an environmental response, a mesh networking coherence, a data coverage, a target coverage, a signal diversity, a critical response, and a motion In embodiments, the benchmarking data further includes data selected from the list consisting of a quality of service commitment, a quality of service guarantee, a service level agreement, and a predetermined quality of service value.

In embodiments, the benchmarking data further includes data selected from the list consisting of a network interference value, a network obstruction value, and an area of impeded network connectivity.

In embodiments, the transmission feedback includes a communication interference value selected from the values consisting of an interference caused by a component of the system, an interference caused by one of the sensors, an interference caused by a metallic object, an interference caused by a physical obstruction, an attenuated signal caused by a low power condition, and an attenuated signal caused by a network traffic demand in a portion of the network.

The present disclosure describes a system for self-organized, network-sensitive data collection in an industrial environment, the system according to one disclosed non-limiting embodiment of the present disclosure can include an industrial system including a plurality of components, and a plurality of sensors each operatively coupled to at least one of the plurality of components, a sensor communication circuit structured to interpret a plurality of sensor data values from the plurality of sensors at a predetermined frequency, a system collaboration circuit structured to communicate at least a portion of the plurality of sensor data values over a network having a plurality of nodes to a storage target computing device according to a sensor data transmission protocol, a transmission environment circuit structured to determine transmission feedback corresponding to the communication of the at least a portion of the plurality of sensor data values over the network, a network management circuit structured to update the sensor data transmission protocol in response to the transmission feedback and a network notification circuit structured to provide an alert value in response to the updated sensor data transmission protocol, wherein the system collaboration circuit is further responsive to the updated sensor data transmission protocol.

In embodiments, the transmission feedback includes at least one feedback value selected from the values consisting of: a change in transmission pricing, a change in storage pricing, a loss of connectivity, a reduction of bandwidth, a change in connectivity, a change in network availability, a change in network range, a change in wide area network (WAN) connectivity, and a change in wireless local area network (WLAN) connectivity.

In embodiments, the network management circuit further includes an expert system, and wherein the updating the sensor data transmission protocol is further in response to operations of the expert system.

In embodiments, the expert system includes at least one system selected from the systems consisting of: a rule-based system, a model-based system, a neural-net system, a Bayesian-based system, a fuzzy logic-based system, and a machine learning system.

In embodiments, the network management circuit further includes a machine learning algorithm, and wherein the updating the sensor data transmission protocol is further in response to operations of the machine learning algorithm.

In embodiments, the machine learning algorithm is further structured to utilize feedback data including the transmission conditions.

In embodiments, the feedback data further includes at least a portion of the plurality of sensor values.

In embodiments, the feedback data further includes benchmarking data.

In embodiments, the benchmarking data further includes data selected from the list consisting of: a network efficiency, a data efficiency, a comparison with offset data collectors, a throughput efficiency, a data efficacy, a data quality, a data precision, a data accuracy, and a data frequency.

In embodiments, the benchmarking data further includes data selected from the list consisting of: an environmental response, a mesh networking coherence, a data coverage, a target coverage, a signal diversity, a critical response, and a motion efficiency.

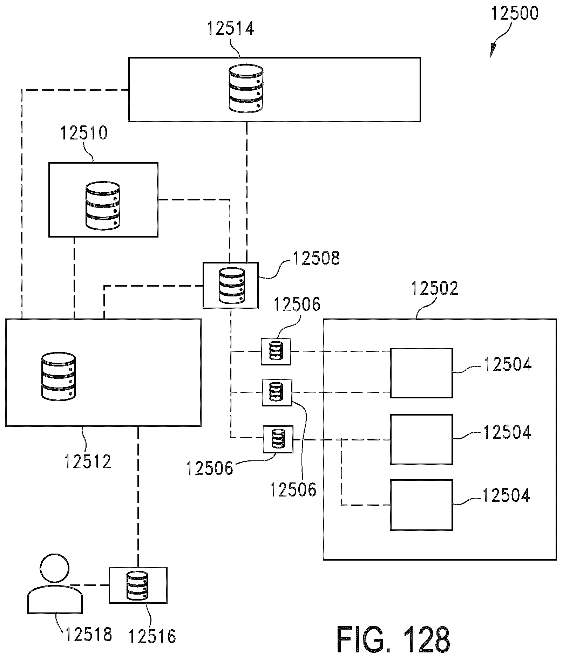

Referencing Figure 128, an example system 12500 for data collection in an industrial environment includes an industrial system 12502 having a number of components 12504, and a number of sensors 12506, wherein each of the sensors 12506 is operatively coupled to at least one of the components 12504. The selection, distribution, type, and communicative setup of sensors depends upon the application of the system 12500 and/or the context.

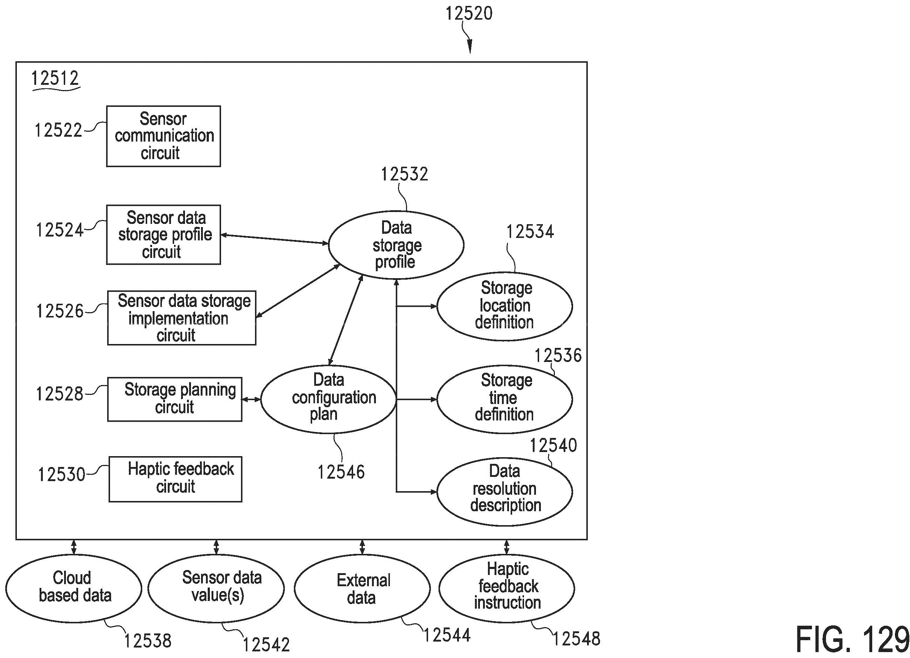

The example system 12500 further includes a sensor communication circuit 12522 (reference Figure 129) that interprets a number of sensor data values 12542. An example system includes the sensor data values 12542 being a number of values to support a sensor fusion operation, for example a set of sensors believed to encompass detection of operating conditions of the system that affect a desired output, to control a process or portion of the industrial system 12502, to diagnose or predict an aspect of the industrial system 12502 or a process associated with the industrial system industrial system 12502.

In certain embodiments, sensor data values 12542 are provided to a data collector 12508, which may be in communication with multiple sensors 12506 and/or with a controller 12512. In certain embodiments, a plant computer 12510 is additionally or alternatively present. In the example system, the controller 12512 is structured to functionally execute operations of the sensor communication circuit 12522, sensor data storage profile circuit 12524, sensor data storage implementation circuit 12526, storage planning circuit 12528, and/or haptic feedback circuit 12530. The controller 12512 is depicted as a separate device for clarity of description. Aspects of the controller 12512 may be present on the sensors 12506, the data controller 12508, the plant computer 12510, and/or on a cloud computing device 12514. In certain embodiments described throughout this disclosure, all aspects of the controller 12512 or other controllers may be present in another device depicted on the system 12500. The plant computer 12510 represents local computing resources, for example processing, memory, and/or network resources, that may be present and/or in communication with the industrial system 12500. In certain embodiments, the cloud computing device 12514 represents computing resources externally available to the industrial system 12502, for example over a private network, intra-net, through cellular communications, satellite communications, and/or over the internet. In certain embodiments, the data controller 12508 may be a computing device, a smart sensor, a MUX box, or other data collection device capable to receive data from multiple sensors and to pass-through the data and/or store data for later transmission. An example data controller 12508 has no storage and/or limited storage, and selectively passes sensor data therethrough, with a subset of the sensor data being communicated at a given time due to bandwidth considerations of the data controller 12508, a related network, and/or imposed by environmental constraints. In certain embodiments, one or more sensors and/or computing devices in the system 12500 are portable devices - for example a plant operator walking through the industrial system may have a smart phone, which the system 12500 may selectively utilize as a data controller 12508, sensor 12506 - for example to enhance communication throughput, sensor resolution, and/or as a primary method for communicating sensor data values 12542 to the controller 12512. The system 12500 depicts the controller 12512, the sensors 12506, the data controller 12508, the plant computer 12510, and/or the cloud computing device 12514 having a memory storage for storing sensor data thereon, any one or more of which may not have a memory storage for storing sensor data thereon. In certain embodiments, the sensor data storage profile circuit 12524 prepares a data storage profile 12532 that directs sensor data to memory storage, including moving sensor data in a controlled manner from one memory storage to another. Sensor data stored on various devices consumes memory on the device, transferring the stored data between device consumes network and/or communication bandwidth in the system 12500, and/or operations on sensor data such as processing, compression, statistical analysis, summarization, and/or provision of alerts consumes processor cycles as well as memory to support operations such as buffer files, intermediate data, and the like. Accordingly, improved or optimal configuration and/or updating of the data storage profile 12532 provides for lower utilization of system resources and/or allows for the storage of sensor data with higher resolution, over longer time frames, and/or from a larger number of sensors.

Referencing Figure 129, an example apparatus 12520 for self-organizing data storage for a data collector for an industrial system is depicted. An example apparatus 12520 includes a controller, such as controller 12512. The example controller includes a sensor communication circuit 12522 that interprets a number of sensor data values 12542, and a sensor data storage profile circuit 12524 that determines a data storage profile 12532. The data storage profile 12532 includes a data storage plan for the number of sensor data values 12542. The data storage plan includes how much of the sensor data values 12542 is stored initially (e.g., as the data is sampled, and/or after initial transmission to a data controller 12508, plant computer 12510, controller 12512, and/or cloud-computing device 12514). The example data storage profile 12532 includes a plan for the transmission of data, which may be according to a time, a process stage, operating conditions of the system 12500 and/or a network related to the system, as well as the communication conditions of devices within the system 12500.

For example, data from a temperature sensor may be planned to be stored locally on a sensor having storage capacity, and transmitted in bursts to a data controller. The data controller may be instructed to transmit the sensor data to the cloud computing device on a schedule, for example as the data controller memory reaches a threshold, as network communication capacity is available, at the conclusion of a process, and/or upon request. Additionally or alternatively, data from the sensors may be changed on a device or upon transfer of the data (e.g., just before transfer, just after transfer, or on a schedule). For example, the data storage profile 12532 may describe storing high resolution, high precision, and/or high-sampling rate data, and reducing the storage of the data set after a period of time, a selected event, and/or confirmation of a successful process or that the high resolution data is no longer needed. Accordingly, higher resolution data and/or data from a large number of sensors may be available for utilization, such as by a sensor fusion operation or the like, while the long-term memory utilization is also managed. Each of the sensor data sets may be treated individually for memory storage characteristics, and/or sensors may be grouped for similar treatment (e.g., sensors having similar data characteristics and/or impact on the system, sensors cooperating in a sensor fusion operation, a group of sensors utilized for a model or a virtual sensor, etc.). In certain embodiments, sensor data from a single sensor may be treated distinctly according to an update of the data storage profile 12532, a time or process stage at which the data is taken, and/or a system condition such as a network issue, a fault condition, or the like. Additionally or alternatively, a single set of sensor data may be stored in multiple places in the system, for example where the same data is utilized in several separate sensor fusion operations, and the resource consumption from storing multiple sets of the same data is lower than a processor or network utilization to utilize a single stored data set in several separate processes.

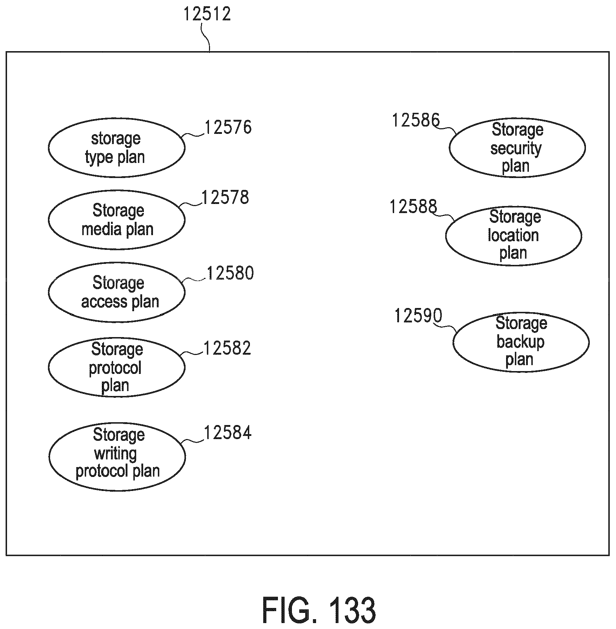

Referencing Figure 133, various aspects of an example data storage profile 12532 are depicted. The example data storage profile 12532 includes aspects of the data storage profile 12532 that may be included as additional or alternative aspects of the data storage profile 12532 relative to the storage location definition 12534, the storage time definition, and/or the storage time definition 12536, data resolution description 12540, and/or may be included as aspects of these. Any one or more of the factors or parameters relating to storage depicted in Figure 133 may be included in a data storage profile 12532 and/or managed by a self-organizing storage system (e.g., system 12500 and/or controller 12532). The self-organizing storage system may manage or optimize any such parameters or factors noted throughout this disclosure, individually or in combination, using an expert system, which may involve a rule-based optimization, optimization based on a model of performance, and/or optimization using machine learning/artificial intelligence, optionally including deep learning approaches, or a hybrid or combination of the above. In embodiments, an example data storage profile 12532 includes a storage type plan 12576 or profile that accounts for or specifies a type of storage, such as based on the underlying physical media type of the storage, the type of device or system on which storage resides, the mechanism by which storage can be accessed for reading or writing data, or the like. For example, a storage media plan 12578 may specify or account for use of tape media, hard disk drive media, flash memory media, non-volatile memory, optical media, one-time programmable memory, or the like. The storage media plan may account for or specify parameters relating to the media, including capabilities such as storage duration, power usage, reliability, redundancy, thermal performance factors, robustness to environmental conditions (such as radiation or extreme temperatures), input/output speeds and capabilities, writing speeds, reading speeds, and the like, or other media specific parameters such as data file organization, operating system, read-write life cycle, data error rates, and/or data compression aspects related to or inherent to the media or media controller. A storage access plan 12580 or profile may specify or account for the nature of the interface to available storage, such as database storage (including relational, object-oriented, and other databases, as well as distributed databases, virtual machines, cloud-based databases, and the like), cloud storage (such as S3™ buckets and other simple storage formats), stream-based storage, cache storage, edge storage (e.g., in edge-based network nodes), on-device storage, server-based storage, network-attached storage or the like. The storage access plan or profile may specify or account for factors such as the cost of different storage types, input/output performance, reliability, complexity, size, and other factors. A storage protocol plan 12582 or profile may specify or account for a protocol by which data will be transmitted or written, such as a streaming protocol, an IP-based protocol, a non-volatile memory express protocol, a SATA protocol or other network-attached storage protocol, a disk-attached storage protocol, an Ethernet protocol, a peered storage protocol, a distributed ledger protocol, a packet-based storage protocol, a batch-based storage protocol, a metadata storage protocol, a compressed storage protocol (using various compression types, such as for packet-based media, streaming media, lossy or lossless compression types, and the like), or others. The storage protocol plan may account for or specify factors relating to the storage protocol, such as input/output performance, compatibility with available network resources, cost, complexity, data processing required to implement the protocol, network utilization to support the protocol, robustness of the protocol to support system noise (e.g., EM, competing network traffic, interruption frequency of network availability), memory utilization to implement the protocol (such as: as-stored memory utilization, and/or intermediate memory utilization in creating or transferring the data), and the like. A storage writing protocol 12584 plan or profile may specify or account for how data will be written to storage, such as in file form, in streaming form, in batch form, in discrete chunks, to partitions, in stripes or bands across different storage locations, in streams, in packets or the like. The storage writing protocol may account for or specify parameters and factors relating to writing, such as input speed, reliability, redundancy, security, and the like. A storage security plan 12586 or profile may account for or specify how storage will be secured, such as availability or type of password protection, authentication, permissioning, rights management, encryption (of the data, of the storage media, and/or of network traffic on the system), physical isolation, network isolation, geographic placement, and the like. A storage location plan 12588 or profile may account for or specify a location for storage, such as a geolocation, a network location (e.g., at the edge, on a given server, or within a given cloud platform or platforms), or a location on a device, such as a location on a data collector, a location on a handheld device (such as a smart phone, tablet, or personal computer of an operator within an environment), a location within or across a group of devices (such as a mesh, a peer-to-peer group, a ring, a hub-and-spoke group, a set of parallel devices, a swarm of devices (such as a swarm of collectors), or the like), a location in an industrial environment (such as or within an storage element of an instrumentation system of or for a machine, a location on an information technology system for the environment, or the like), or a dedicated storage system, such as a disk, dongle, USB device, or the like. A storage backup plan 12590 or profile may account for or specify a plan for backup or redundancy of stored data, such as indicating redundant locations and managing any or all of the above factors for a backup storage location. In certain embodiments, the storage security plan 12586 and/or storage backup plan 12590 may specify parameters such as data retention, long-term storage plans (e.g., migrate the stored data to a different storage media after a period of time and/or after certain operations in the system are performed on the data), physical risk management of the data and/or storage media (e.g., provision of the data in multiple geographic regions having distinct physical risk parameters, movement of the data when a storage location experiences a physical risk, refreshing the data according to a predicted life cycle of a long-term storage media, etc.).

The example controller 12512 further includes a sensor data storage implementation circuit 12526 that stores at least a portion of the number of sensor data values in response to the data storage profile 12532. An example controller 12512 includes the data storage profile 12532 having a storage location definition 12534 corresponding to at least one of the number of sensor data values 12542, including at least one location such as: a sensor storage location (e.g., data stored for a period of time on the sensor, and/or on a portable device for a user 12518 in proximity to the industrial system 12502 where the portable device is adapted by the system as a sensor), a sensor communication device storage location (e.g., a data controller 12508, MUX device, smart sensor in communication with other sensors, and/or on a portable device for a user 12518 in proximity to the industrial system 12502 or a network of the industrial system 12502 where the portable device is adapted by the system as a communication device to transfer sensor data between components in the system, etc.), a regional network storage location (e.g., on a plant computer 12510 and/or controller 12512), and/or a global network storage location (e.g., on a cloud computing device 12514).

An example controller 12512 includes the data storage profile 12532 including a storage time definition 12536 corresponding to at least one of the number of sensor data values 12542, including at least one time value such as: a time domain description over which the corresponding at least one of the number of sensor data values is to be stored (e.g., times and locations for the data, which may include relative time to some aspect such as the time of data sampling, a process stage start or stop time, etc., or an absolute time such as midnight, Saturday, the first of the month, etc.); a time domain storage trajectory including a number of time values corresponding to a number of storage locations over which the corresponding at least one of the number of sensor data values is to be stored (e.g., the flow of the sensor data through the system across a number of devices, with the time for each storage transfer including a relative or absolute time description); a process description value over which the corresponding at least one of the number of sensor data values is to be stored (e.g.,

including a process description and the planned storage location for data values during the described process portion; the process description can include stages of a process, and identification of which process is related to the storage plan, and the like); and/or a process description trajectory including a number of process stages corresponding to a number of storage locations over which the corresponding at least one of the number of sensor data values is to be stored (e.g., the flow of the sensor data through the system across a number of devices, with process stage and/or process identification for each storage transfer).

An example controller 12512 includes the data storage profile 12532 including a data resolution description 12540 corresponding to at least one of the number of sensor data values 12544, where the data resolution description 12540 includes a value such as: a detection density value corresponding to the at least one of the number of sensor data values (e.g., detection density may be time sampling resolution, spatial sampling resolution, precision of the sampled data, and/or a processing operation to be applied that may affect the available resolution, such as filtering and/or lossy compression of the data); a detection density value corresponding to a more than one of the number of the sensor data values (e.g., a group of sensors having similar detection density values, a secondary data value determined from a group of sensors having a specified detection density value, etc.); a detection density trajectory including a number of detection density values of the at least one of the number of sensor data values, each of the number of detection density values corresponding to a time value (e.g., any of the detection density concepts combined with any of the time domain concepts); a detection density trajectory including a number of detection density values of the at least one of the number of sensor data values, each of the number of detection density values corresponding to a process stage value (e.g., any of the detection density concepts combined with any of the process description or stage concepts); and/or a detection density trajectory comprising a number of detection density values of the at least one of the number of sensor data values, each of the number of detection density values corresponding to a storage location value (e.g., detection density can be varied according to the device storing the data).

An example sensor data storage profile circuit 12524 further updates the data storage profile 12532 after the operations of the sensor data storage implementation circuit 12526, where the sensor data storage implementation circuit 12526 further stores the portion of the number of sensor data values 12544 in response to the updated data storage profile 12532. For example, during operations of a system at a first point in time, the sensor data storage implementation circuit 12526 utilizes a currently existing data storage profile sensor data storage implementation circuit 12526, which may be based on initial estimates of the system performance, desired data from an operator of the system, and/or from a previous operation of the sensor data storage profile circuit 12524. During operations of the system, the sensor data storage implementation circuit 12526 stores data according to the data storage profile 12532, and the sensor data storage profile circuit 12524 determines parameters for the data storage profile 12532 which may result in improved performance of the system. An example sensor data storage profile circuit 12524 tests various parameters for the data storage profile 12532, for example utilizing a machine learning optimization routine, and upon determining that an improved data storage profile 12532 is available, the sensor data storage profile circuit 12524 provides the updated data storage profile 12532 which is utilized by the sensor data storage implementation circuit 12526. In certain embodiments, the sensor data storage profile circuit 12524 may perform various operations such as supplying an intermediate data storage profile 12532 which is utilized by the sensor data storage implementation circuit 12526 to produce real-world results, applies modeling to the system (either first principles modeling based on system characteristics, a model utilizing actual operating data for the system, a model utilizing actual operating data for an offset system, and/or combinations of these) to determine what an outcome of a given data storage profile 12532 will be or would have been (including, for example, taking extra sensor data beyond what is utilized to support a process operated by the system), and/or applying randomized changes to the data storage profile 12532 to ensure that an optimization routine does not settle into a local optimum or non-optimal condition.

An example sensor data storage profile circuit 12524 further updates the data storage profile 12532 in response to external data 12544 and/or cloud-based data 12538, including data such as: an enhanced data request value (e.g., an operator, model, optimization routine, and/or other process requests enhanced data resolution for one or more parameters); a process success value (e.g., indicating that current storage practice provides for sufficient data availability and/or system performance; and/or that current storage practice may be over-capable, and one or more changes to reduce system utilization may be available); a process failure value (e.g., indicating that current storage practices may not provide for sufficient data availability and/or system performance, which may include additional operations or alerts to an operator to determine whether the data transmission and/or availability contributed to the process failure); a component service value (e.g., an operation to adjust the data storage to ensure higher resolution data is available to improve a learning algorithm predicting future service events, and/or to determine which factors may have contributed to premature service); a component maintenance value (e.g., an operation to adjust the data storage to ensure higher resolution data is available to improve a learning algorithm predicting future maintenance events, and/or to determine which factors may have contributed to premature maintenance); a network description value (e.g., a change in the network, for example by identification of devices, determination of protocols, and/or as entered by a user or operator, where the network change results in a capability change and potentially a distinct optimal storage plan for sensor data); a process feedback value (e.g., one or more process conditions detected); a network feedback value (e.g., one or more network changes as determined by actual operations of the network - e.g., a loss or reduction in communication of one or more devices, a network communication volume change, a transmission noise value change on the network, etc.); a sensor feedback value (e.g., metadata such as a sensor fault, capability change; and/or based on the detected data from the system, for example an anomalous reading, rate of change, or off-nominal condition indicating that enhanced or reduced resolution, sampling time, etc. should change the storage plan); and/or a second data storage profile, where the second data storage profile was generated for an offset system.

An example storage planning circuit 12528 determines a data configuration plan 12546 and updates the data storage profile 12532 in response to the data configuration plan 12546, where the sensor data storage implementation circuit 12526 further stores at least a portion of the number of sensor data values in response to the updated data storage profile 12532. An example data configuration plan 12546 includes a value such as: a data storage structure value (e.g., a data type, such as integer, string, a comma delimited file, how many bits are committed to the values, etc.); a data compression value (e.g., whether to compress data, a compression model to use, and/or whether segments of data can be replaced with summary information, polynomial or other curve fit summarizations, etc.); a data write strategy value (e.g., whether to store values in a distributed manner or on a single device, which network communication and/or operating system protocols to utilize); a data hierarchy value (e.g., which data is favored over other data where storage constraints and/or communication constraints will limit the stored data - the limits may be temporal, such as data will not be in the intended location at the intended time, or permanent, such as some data will need to be compressed in a lossy manner, and/or lost); an enhanced access value determined for the data (e.g., the data is of a type for reports, searching, modeling access, and/or otherwise tagged, where enhanced access includes where the data is stored for scope of availability, indexing of data, summarization of data, topical reports of data, which may be stored in addition to the raw or processed sensor data); and/or an instruction value corresponding to the data (e.g., a placeholder indicating where data can be located, an interface to access the data, metadata indicating units, precision, time frames, processes in operation, faults present, outcomes, etc.).

It can be seen that the provision of control over data flow and storage through the system allows for improvement generally, and movement toward optimization over time, of data management throughout the system. Accordingly, more data of a higher resolution can be accumulated, and in a more readily accessible manner, than previously known systems with fixed or manually configurable data storage and flow for a given utilization of resources such as storage space, communication bandwidth, power consumption, and/or processor execution cycles. Additionally, the system can respond to process variations that affect the optimal or beneficial parameters for controlling data flow and storage. One of skill in the art, having the benefit of the disclosures herein, will recognize that combinations of control of data storage schemes with data type control and knowledge about process operations for a system create powerful combinations in certain contemplated embodiments. For example, data of a higher resolution can be maintained for a longer period and made available if a need for the data arises, without incurring the full cost of storing the data permanently and/or communicating the data throughout every layer of the system.

In an embodiment, in an underground mining inspection system, certain detailed data regarding toxic gas concentrations, temperatures, noise, etc. may need to be captured and stored for regulatory purposes, but for ongoing operational purposes, perhaps only a single data point regarding one or more toxic gases is needed periodically. In this embodiment, the data storage profile for the system may indicate that only certain sensor data aligned with regulatory needs be stored in a certain manner that is long term and optionally only available as needed, while other sensor data required operationally be stored in a more accessible manner.

In another embodiment involving automotive brakes for fleet vehicles, data regarding brake use and performance may be acquired at high resolution and stored in a first data storage that is not transmitted throughout the network, while lower resolution data are transmitted periodically and/or in near real time to a fleet control and maintenance application. Should the application or other user require higher resolution data, it may be accessed from the first data storage.

In a further embodiment of manufacturing body and frame components of trucks and cars, certain detailed data regarding paint color, surface curvature, and other quality control measures may be captured and stored at high resolution, but for ongoing operational purposes, only low resolution data regarding throughput are transmitted. In this embodiment, the data storage profile for the system may indicate that only certain sensor data aligned with quality control needs be stored in a certain manner that is long term and optionally only available as needed, while other sensor data required operationally be stored in a more accessible manner.

In another example, data types, resolution, and the like can be configured and changed as the data flows through the system, according to values that are beneficial for the individual components handling the data, according to the utilized networking resources for the data, and/or according to accompanying data (e.g., a model, virtual sensor, and/or sensor fusion operation) where higher capability data would not improve the precision of the process utilizing the accompanying data.

In an embodiment, in rail condition monitoring systems, as rail condition data are acquired, each component of the system may require different resolutions of the same data. Continuing with this example, as real-time rail traffic data are acquired, these data may be stored and/or transmitted at low resolution in order to quickly disseminate the data throughout the system, while utilization and load data may be stored and utilized at higher resolution to track rail use fees and need for rail maintenance at a more granular level.

In another embodiment of a hydraulic pump operating in a tractor, as the tractor is in the field and does not have access to a network, data from on-board sensors may be acquired and stored in a local manner on the tractor at low resolution, but when the tractor regains access, data may be acquired and transmitted at high resolution.

In yet another embodiment of an actuator in a robotic handling unit in an automotive plant, data regarding the actuator may flow into multiple downstream systems, such as a production tracking system that utilizes the actuator data alone and an energy efficiency tracking system that utilizes the data in a sensor fusion with data from environmental sensors. Resolution of the actuator data may be configured differently as it is transmitted to each of these systems for their disparate uses.

In still another embodiment of a generator in a mine, data may be acquired regarding the performance of the generator, carbon monoxide levels near the generator and a cost for running the generator. Each component of a control system overseeing the mine may require different resolutions of the same data. Continuing with this example, as carbon monoxide data are acquired, these data may be stored and/or transmitted at low resolution in order to quickly disseminate the data throughout the system in order to properly alert workers. Performance and cost data may be stored and utilized at higher resolution to track economic efficiency and lifetime maintenance needs.

In an additional embodiment, sensors on a truck's wheel end may monitor lubrication, noise (e.g., grinding, vibration) and temperature. While in the field, sensor data may be transmitted remotely at low resolution for remote monitoring, but when within a threshold distance from a fleet maintenance facility, data may be transmitted at high resolution.

In another example, accompanying information for the data allows for efficient downstream processing (e.g., by a downstream device or process accessing the data) including unpackaging the data, readily determining where related higher capability data may be present in the system, and/or streamlining operations utilizing the data (e.g., reporting, modeling, alerting, and/or performing a sensor fusion or other system analysis). An embodiment includes storing high capability (e.g., high-sampling rate, high precision, indexed, etc.) in a first storage device in the system (e.g., close to the sensors in the network layer to preserve network communication resources) and sending lower capability data up the network layers (e.g., to a cloud-computing device), where the lower capability data includes accompanying information to access the stored high capability data, including accompanying data that may be accessible to a user (e.g., a header, message box, or other organically interfaceable accompanying data) and/or accessible to an automated process (e.g., structured data, XML, populated fields, or the like) where the process can utilize the accompanying data to automatically request, retrieve, or access the high capability data. In certain embodiments, accompanying data may further include information about the content, precision, sampling time, calibrations (e.g., de-bouncing, filtering, or other processing applied) such that an accessing component or user can determine without retrieving the high capability data whether such data will meet the desired parameters.

In an embodiment, vibration noise from vibration sensors attached to vibrators on an assembly line may be stored locally in a high resolution format while a low resolution version of the same data with accompanying information regarding the availability of ambient and local noise data for a sensor fusion may be transmitted to a cloud-based server. If a resident process on the server requires the high resolution data, such as a machine learning process, the server may retrieve the data at that time.

In another embodiment of an airplane engine, performance data aggregated from a plurality of sensors may be transmitted while in flight along with accompanying information to a remote site. The accompanying information, such as a header with metadata relating to historical plane information, may allow the remote site to efficiently analyze the performance data in the context of the historical data without having to access additional databases.

In a further embodiment of a coal crusher in a power generation facility, data accompanying low quality sensor data regarding the size of coal exiting the crusher may include information about the precision in the size measurement such that a technician can determine if the higher resolution data are needed to confirm a determination that the crusher needs to come offline for maintenance.

In yet a further embodiment of a drilling machine or production platform employed in oil and gas production, high capability data may be acquired and stored locally regarding parameters of the drill's and platform's operation, but only low capability data are transmitted off-site to conserve bandwidth. Along with the low capability data, accompanying information may include instructions on how an automated off-site process can automatically access the high capability data in the event that it is required.

In still a further embodiment, temperature sensors on a pump employed in oil & gas production or mining may be stored locally in a high resolution format while a low resolution version of the same data with accompanying information regarding the availability of noise and energy use data for a sensor fusion may be transmitted to a cloud-based server. If a resident process on the server requires the high resolution data, such as a machine learning process, the server may retrieve the data at that time.

In another embodiment of a gearbox in an automatic robotic handling unit or an agricultural setting, performance data aggregated from a plurality of sensors may be transmitted while in use along with accompanying information to a remote site. The accompanying information, such as a header with metadata relating to historical gearbox information, may allow the remote site to efficiently analyze the performance data in the context of the historical data without having to access additional databases.

In a further embodiment of a ventilation system in a mine, data accompanying low quality sensor data regarding the size of particulates in the air may include information about the precision in the size measurement such that a technician can determine if the higher resolution data are needed to confirm a determination that the ventilation system requires maintenance.

In yet a further embodiment of a rolling bearing employed in agriculture, high capability data may be acquired and stored locally regarding parameters of the rolling bearing's operation, but only low capability data are transmitted off-site to conserve bandwidth. Along with the low capability data, accompanying information may include instructions on how an automated off-site process can automatically access the high capability data in the event that it is required.

In a further embodiment of a stamp mill in a mine, data accompanying low quality sensor data regarding the size of mineral deposits exiting the stamp mill may include information about the precision in the size measurement such that a technician can determine if the higher resolution data are needed to confirm a determination that the stamp mill requires a change in an operation parameter.

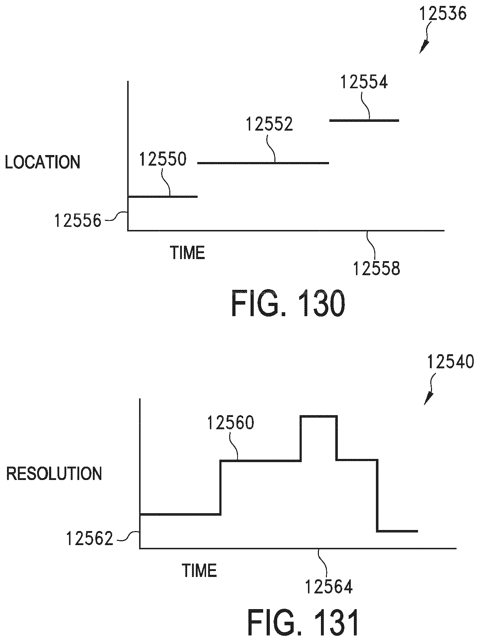

Referencing Figure 130, an example storage time definition 12536 is depicted. The example storage time definition 12536 depicts a number of storage locations 12556 corresponding to a number of time values 12558. It is understood that any values such as storage types, storage media, storage access, storage protocols, storage writing values, storage security, and/or storage backup values, may be included in the storage time definition 12536. Additionally or alternatively, an example storage time definition 12536 may include process operations, events, and/or other values in addition to or as an alternative to time values 12558. The example storage time definition 12536 depicts movement of related sensor data to a first storage location 12550 over a first time interval, to a second storage location 12552 over a second time internal, and to a third storage location 12554 over a third time interval. The storage location values 12550, 12552, 12554 are depicted as an integral selection corresponding to planned storage locations, but additionally or alternatively the values may be continuous or discrete, but not necessarily integral values. For example, a storage location value 12550 of "1" may be associated with a first storage location, and a storage location value 12550 of "2" may be associated with a second storage location, where a value between "1" and "2" has an understood meaning - such as a prioritization to move the data (e.g., a "1.1" indicates that the data should be moved from "2" to "1" with a relatively high priority compared to a "1.4"), a percentage of the data to be moved (e.g., to control network utilization, memory utilization, or the like during a transfer operation), and/or a preference for a storage location with alternative options (e.g., to allow for directing storage location, and inclusion in a cost function such that storage location can be balanced with other constraints in the system). Additionally or alternatively, the storage time definition 12536 can include additional dimensions (e.g., changing protocols, media, security plans, etc.) and/or can include multiple options for the storage plan (e.g., providing a weighted value between 2, 3, 4, or more storage locations, protocols, media, etc. in a triangulated or multiple-dimension definition space).

Referencing Figure 131 an example data resolution description 12540 is depicted. The example data resolution description 12540 depicts a number of data resolution values 12562 corresponding to a number of time values 12564. It is understood that any values such as storage types, storage media, storage access, storage protocols, storage writing values, storage security, and/or storage backup values, may be included in the data resolution description 12540. Additionally or alternatively, an example data resolution description 12540 may include process operations, events, and/or other values in addition to or as an alternative to time values 12558. The example data resolution description 12540 depicts changes in the resolution of stored related sensor data resolution values 12560 over time intervals, for example operating at a low resolution initially, stepping up to a higher resolution (e.g., corresponding to a process start time), to a high resolution value (e.g., during a process time where the process is significantly improved by high resolution of the related sensor data), and to a low resolution value (e.g., after a completion of the process). The example depicts a higher resolution before the process starts than after the process ends as an illustrative example, but the data resolution description 12540 may include any data resolution trajectory. The data resolution values 12560 are depicted as integral selections corresponding to planned data resolutions, but additionally or alternatively the values may be continuous or discrete, but not necessarily integral values. For example, data resolution values 12560 of "1" may be associated with a first data resolution (e.g., a specific sampling time, byte resolution, etc.), and a data resolution values 12560 of "2" may be associated with a second data resolution, where a value between "1" and "2" has an understood meaning - such as a prioritization to sample at the defined resolution (e.g., a "1.1" indicates the data should be taken at a sampling rate corresponding to "1" with a relatively high priority compared to a "1.3", and/or at a sampling rate 10% of the way between the rate between "1" and "2"), and/or a preference for a data resolution with alternative options (e.g., to allow for sensor or network limitations, available sensor communication devices such as a data controller, smart sensor, or portable device taking the data from the sensor, and/or inclusion in a cost function such that data resolution can be balanced with other constraints in the system). Additionally or alternatively, the data resolution description 12540 can include additional dimensions (e.g., changing protocols, media, security plans, etc.) and/or can include multiple options for the data resolution plan (e.g., providing a weighted value between 2, 3, 4, or more data resolution values, protocols, media, etc. in a triangulated or multiple-dimension definition space).

An example system 12500 further includes a haptic feedback circuit 12530 that determines a haptic feedback instruction 12548 in response to at least one of the number of sensor values 12542 and/or the data storage profile 12532, and a haptic feedback device 12516 responsive to the haptic feedback instruction 12548. Example and non-limiting haptic feedback instructions 12548 include an instruction such as: a vibration command; a temperature command; a sound command; an electrical command; and/or a light command. Example and non-limiting operations of the haptic feedback circuit 12530 include feedback that data is stored or being stored on the haptic feedback device 12516 and/or on a portable device associated with the user 12518 in communication with the haptic feedback device 12516 (e.g., user 12518 traverses through the system 12500 with a smart phone, which the system 12500 utilizes to store sensor data, and provides a haptic feedback instructions 12548 to notify the user 12518 that the smart phone is currently being utilized by the system 12500, for example allowing the user 12518 to remain in communication with the sensor, data controller, or other transmitting device, and/or allowing the user to actively cancel or enable the data transfer). Additionally or alternatively, the haptic feedback device 12516 may be the smart phone (e.g., utilizing vibration, sound, light, or other haptic aspects of the smart phone), and/or the haptic feedback device 12516 may include data storage and/or communication capabilities.

In certain embodiments, the haptic feedback circuit 12530 provides a haptic feedback instruction 12548 as an alert or notification to the user 12518, for example to alert or notify the user 12518 that a process has commenced or is about to start, that an off-nominal operation is detected or predicted, that a component of the system requires or is predicted to require maintenance, that an aspect of the system is in a condition that the user 12518 may want to be aware of (e.g., a component is still powered, has high potential energy of any type, is at a high pressure, and/or is at a high temperature where the user 12518 may be in proximity to the component), that a data storage related aspect of the system is in a noteworthy condition (e.g., a data storage component of the system is at capacity, out of communication, is in a fault condition, has lost contact with a sensor, etc.), to request a response from the user 12518 (e.g., an approval to start a process, data transfer, process rate change, clear a fault, etc.) In certain embodiments, the haptic feedback circuit 12530 configures the haptic feedback instruction 12548 to provide an intuitive feedback to the user 12518. For example, an alert value may provide a more rapid, urgent, and/or intermittent vibration mode relative to an informational notification; a temperature based alert or notification may utilize a temperature based haptic feedback (e.g., an overtemperature vessel notification may provide a warm or cold haptic feedback) and/or flashing a color that is associated with the temperature (e.g., flashing red for an overtemperature or blue for an under-temperature); an electrically based notification may provide an electrically associated haptic feedback (e.g., a sound associated with electricity such as a buzzing or sparking sound, or even a mild electrical feedback such as when a user is opening a panel for a component that is still powered); providing a vibration feedback for a bearing, motor, or other rotating or vibrating component that is operating off-nominally; and/or providing a requested feedback to the user based upon sensed data (e.g., transmitting a vibration profile to the haptic feedback device that is analogous to the detected vibration in a requested component for example allowing an expert user to diagnose the component without physical contact; providing a haptic feedback for a requested component for example if the user is double checking a lockout/tagout operation before entering a component, opening a panel, and/or entering a potentially hazardous area). The provided examples for operations of the haptic feedback circuit 12530 are non-limiting illustrations.

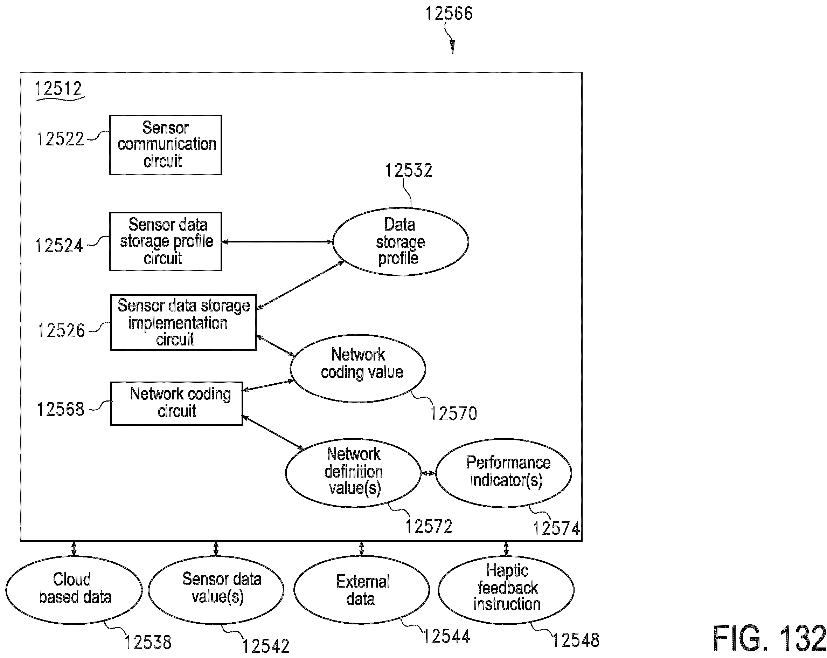

Referencing Figure 132, an example apparatus for data collection in an industrial environment 12566 includes a controller 12512 a sensor communication circuit 12522 that interprets a number of sensor data values 12542, a sensor data storage profile circuit 12524 that determines a data storage profile 12532, where the data storage profile 12532 includes a data storage plan for the number of sensor data values 12542, and a network coding circuit 12568 that provides a network coding value 12570 in response to the number of sensor data values 12542 and the data storage profile 12532. The controller 12512 further includes a sensor data storage implementation circuit 12526 that stores at least a portion of the number of sensor data values 12542 in response to the data storage profile 12532 and the network coding value 12570. The network coding value 12570 includes, without limitation, network encoding for data transmission, such as packet sizing, distribution, combinations of sensor data within packets, encoding and decoding algorithms for network data and communications, and/or any other aspects of controlling network communications throughout the system. In certain embodiments, the network coding value 12570 includes a linear network coding algorithm, a random linear network coding algorithm, and/or a convolutional code. Additionally or alternatively, the network coding circuit 12568 provides scheduling and/or synchronization for network communication devices of the system, and can include separate scheduling and/or synchronization for separate networks in the system. The network coding circuit 12568 schedules the network coding value 12570 throughout the system according to the data volumes, transfer rates, and network utilization, and alternatively or additionally performs a self-learning and/or machine learning operation to improve or optimize network coding. For example, a sensor having a single low-volume data transfer to a data controller may utilize TCP/IP packet communication to the data controller without linear network coding, while higher volume aggregated data transfer from the data controller to another system component (e.g., the controller 12532) may utilize linear network coding. The example network coding circuit 12568 adjusts the network coding value 12570 in real time for the components in the system to optimize or improve transfer rates, power utilization, errors and lost packets, and/or any other desired parameters. For example, a given component may have resulting low transfer rates but a large available memory, while a downstream component has a lower available memory (potentially relative to the data storage expectation for that component), and accordingly a complex network coding value 12570 for the given component may not result in improved throughput of data throughout the system, while a network coding value 12570 enhancing throughput for the downstream component may justify the processing overhead for a more complex network coding value 12570.

An example system includes the network coding circuit 12568 further determining a network definition value 12572, and providing the network coding value 12570 further in response to the network definition value 12572. Example network definition values 12572 include values such as: a network feedback value (e.g., transfer rates, up time, synchronization availability, etc.); a network condition value (e.g., presence of noise, transmission/receiver capability, drop-outs, etc.); a network topology value (e.g., the communication flow and connectivity of devices; operating systems, protocols, and storage types of devices; available computing resources on devices; the location and function of devices in the system); an intermittently available network device value (e.g., a known or observed availability for the device over time or process stage; predicted availability of the device; prediction of known noise factors for the device, such as process operations that reduce device availability); and/or a network cost description value (e.g., resource utilization of the device, including relative cost or impact of processing, memory, and/or communication resources; power utilization and cost of power consumption for devices; available power for the device and a cost description for externalities related to consuming the power - such as for a battery where the power itself may not be expensive but the power in the specific location has a cost associated with replacement, including availability or access to the device during operations).

An example system includes the network coding circuit 12568 further providing the network coding value 12570 such that the sensor data storage implementation circuit stores a first portion of the number of sensor data values 12542 utilizing a first network coding value 12570, and a second portion of the number of sensor data values 12542 utilizing a second network coding value 12570 (e.g., the network coding values 12570 can vary with the data being transmitted, the transmitting device, and/or over time or process stage). Example and non-limiting network coding values include: a network type selection (e.g., public, private, wireless, wired, intranet, external, internet, cellular, etc.), a network selection (e.g., which one or more of an available number of networks will be utilized), a network coding selection (e.g., packet definitions, encoding techniques, linear, randomized linear, convolution, triangulated, etc.), a network timing selection (e.g., synchronization and sequencing of data transmissions between devices), a network feature selection (e.g., turning on or off network support devices or repeaters; enabling, disabling, or adjusting security selections; increasing or decreasing a power of a device, etc.), a network protocol selection (e.g., TCP/IP, FTP, Wi-Fi, Bluetooth, Ethernet, and/or routing protocols); a packet size selection (including header and/or parity information); and/or a packet ordering selection (e.g., determining how to transmit the various sensor information that may be on a device, and/or determining the packet to data value correspondence). An example network coding circuit 12568 further adjusts the network coding value 12570 to provide an intermediate network coding value (e.g., as a test coding value on the system, and/or as a modeled coding value being run off-line), to compare a performance indicator 12574 corresponding to each of the network coding value 12570 and the intermediate network coding value, and to provide an updated network coding value (e.g., as the network coding value 12570) in response to the comparison of the performance indicators 12574.

An example system includes an industrial system having a number of components, and a number of sensors each operatively coupled to at least one of the number of components. The number of sensors provide a number of sensor values, and the system further includes a number of organizing structures such as a controller, a data collector, a plant computer, a cloud-based server and/or global computing device, and/or a network layer, where the organizing structures are configured for self-organizing storage of at least a portion of the number of sensor values. For example, operations of the controller 12512 provide for storage and distribution of sensor data values to reduce consumption of resources (processor, network, and/or memory) for storing sensor data. The self-organizing operations include management of the stored sensor data over time, including providing sensor information to system components in time to complete operations therefore (e.g., control, improvement, modeling, and/or machine learning for process operations of the system). Additionally, data security, including long-term security due to storage media, geographic, and/or unauthorized access, is considered throughout the data storage life cycle. An example system further includes the organizing structures providing enhanced resolution of the number of sensor values in response to at least one of an enhanced data request value or an alert value corresponding to the industrial system. The system provides enhanced resolution by controlling the storage processes to address system impact, including keeping lower resolution, summary, or other accessibility data available, and storing higher resolution data in a lower resource utilization manner which is available upon request and/or at a time appropriate to system operations. Example enhanced resolution includes: an enhanced spatial resolution, an enhanced time domain resolution, a greater number of the number of sensor values than a standard resolution of the number of sensor values, and/or a greater precision of at least one of the number of sensor values than a standard resolution of the number of sensor values. An example system further includes a network layer, where the organizing structures are configured for self-organizing network coding for communication of the number of sensor values on the network layer. An example system further includes a haptic feedback device of a user in proximity to at least one of the industrial system or the network layer, and where the organizing structures are configured for providing haptic feedback to the haptic feedback device, and/or for configuring the haptic feedback to provide an intuitive alert to the user.

In embodiments, a system for data collection in an industrial environment may comprise: a sensor communication circuit structured to interpret a plurality of sensor data values; a sensor data storage profile circuit structured to determine a data storage profile, the data storage profile comprising a data storage plan for the plurality of sensor data values; and a sensor data storage implementation circuit structured to store at least a portion of the plurality of sensor data values in response to the data storage profile. In embodiments, the data storage profile may include a storage location definition corresponding to at least one of the plurality of sensor data values, the storage location definition comprising at least one location selected from the locations consisting of: a sensor storage location, a sensor communication device storage location, a regional network storage location, and a global network storage location. The data storage profile may include a storage time definition corresponding to at least one of the plurality of sensor data values, the storage time definition comprising at least one time value selected from the time values consisting of: a time domain description over which the corresponding at least one of the plurality of sensor data values is to be stored; a time domain storage trajectory comprising a plurality of time values corresponding to a plurality of storage locations over which the corresponding at least one of the plurality of sensor data values is to be stored; a process description value over which the corresponding at least one of the plurality of sensor data values is to be stored; and a process description trajectory comprising a plurality of process stages corresponding to a plurality of storage locations over which the corresponding at least one of the plurality of sensor data values is to be stored. The data storage profile may include a data resolution description corresponding to at least one of the plurality of sensor data values, wherein the data resolution description comprises at least one of: a detection density value corresponding to the at least one of the plurality of sensor data values; a detection density value corresponding to a plurality of the at least one of the plurality of the sensor data values; a detection density trajectory comprising a plurality of detection density values of the at least one of the plurality of sensor data values, each of the plurality of detection density values corresponding to a time value; a detection density trajectory comprising a plurality of detection density values of the at least one of the plurality of sensor data values, each of the plurality of detection density values corresponding to a process stage value; and a detection density trajectory comprising a plurality of detection density values of the at least one of the plurality of sensor data values, each of the plurality of detection density values corresponding to a storage location value. The sensor data storage profile circuit may be further structured to update the data storage profile after the operations of the sensor data storage implementation circuit, and wherein the sensor data storage implementation circuit is further structured to store the portion of the plurality of sensor data values in response to the updated data storage profile. The sensor data storage profile circuit may be further structured to update the data storage profile in response to external data, the external data comprising at least one data value selected from the data values consisting of: an enhanced data request value; a process success value; a process failure value; a component service value; a component maintenance value; a network description value; a process feedback value; a network feedback value; a sensor feedback value; and a second data storage profile, the second data storage profile generated for an offset system. A storage planning circuit may be structured to determine a data configuration plan, to update the data storage profile in response to the data configuration plan, and wherein the sensor data storage implementation circuit is further structured to store the at least a portion of the plurality of sensor data values in response to the updated data storage profile. The data configuration plan may include at least one value selected from the values consisting of: a data storage structure value; a data compression value; a data write strategy value; a data hierarchy value; an enhanced access value determined for the data; and an instruction value corresponding to the data. A haptic feedback circuit may be structured to determine a haptic feedback instruction in response to at least one of the plurality of sensor values or the data storage profile; and a haptic feedback device responsive to the haptic feedback instruction. The haptic feedback instruction may include at least one instruction selected from the instructions consisting of: a vibration command; a temperature command; a sound command; an electrical command; and a light command. The data storage plan may be generated by a rule-based expert system utilizing feedback, wherein the feedback relates to one or more of an aspect of the industrial environment or the plurality of sensor data values. The data storage plan may be generated by a model-based expert system utilizing feedback, wherein the feedback relates to one or more of an aspect of the industrial environment or the plurality of sensor data values. The data storage plan may be generated by an iterative expert system utilizing feedback, wherein the feedback relates to one or more of an aspect of the industrial environment or the plurality of sensor data values. The data storage plan may be generated by a deep learning machine system utilizing feedback, wherein the feedback relates to one or more of an aspect of the industrial environment or the plurality of sensor data values. The data storage plan may be based on one or more an underlying physical media type of the storage, a type of device or system on which storage resides, and a mechanism by which storage can be accessed for reading or writing data. The underlying physical media may be one of a tape media, a hard disk drive media, a flash memory media, a non-volatile memory, an optical media, and a one-time programmable memory. The data storage plan may account for or specifies a parameter relating to the underlying physical media comprising one or more of a storage duration, a power usage, a reliability, a redundancy, a thermal performance factor, a robustness to environmental conditions, an input/output speed and capability, a writing speed, a reading speed, a data file organization, an operating system, a read-write life cycle, a data error rate, and a data compression aspect related to or inherent to the underlying physical media or a media controller. The data storage plan may include one or more of a storage type plan, a storage media plan, a storage access plan, a storage protocol plan, a storage writing protocol plan, a storage security plan, a storage location plan, and a storage backup plan.

In embodiments, a system for data collection in an industrial environment may comprise: a sensor communication circuit structured to interpret a plurality of sensor data values; a sensor data storage profile circuit structured to determine a data storage profile, the data storage profile comprising a data storage plan for the plurality of sensor data values; a network coding circuit structured to provide a network coding value in response to the plurality of sensor data values and the data storage profile; and a sensor data storage implementation circuit structured to store at least a portion of the plurality of sensor data values in response to the data storage profile and the network coding value. The network coding circuit may be structured to determine a network definition value, and to provide the network coding value further in response to the network definition value, wherein the network definition value comprises at least one value selected from the values consisting of: a network feedback value; a network condition value; a network topology value; an intermittently available network device value; and a network cost description value. The network coding circuit may be structured to provide the network coding value such that the sensor data storage implementation circuit stores a first portion of the plurality of sensor data values utilizing a first network coding value, and a second portion of the plurality of sensor data values utilizing a second network coding value. The network coding value may include at least one of the values selected from the values consisting of: a network type selection, a network selection, a network coding selection, a network timing selection, a network feature selection, a network protocol selection, a packet size selection, and a packet ordering selection. The network coding circuit may be further structured to adjust the network coding value to provide an intermediate network coding value, to compare a performance indicator corresponding to each of the network coding value and the intermediate network coding value, and to provide an updated network coding value in response to the comparison of the performance indicators.

In embodiments, a system may comprise: an industrial system comprising a plurality of components, and a plurality of sensors each operatively coupled to at least one of the plurality of components; the plurality of sensors providing a plurality of sensor values; and a means for self-organizing storage of at least a portion of the plurality of sensor values. In embodiments, a means may be provided for enhancing resolution of the plurality of sensor values in response to at least one of an enhanced data request value or an alert value corresponding to the industrial system; and wherein the enhanced resolution comprises at least one of an enhanced spatial resolution, an enhanced time domain resolution, a greater number of the plurality of sensor values than a standard resolution of the plurality of sensor values, and a greater precision of at least one of the plurality of sensor values than the standard resolution of the plurality of sensor values. The system may include a network layer, and a means for self-organizing network coding for communication of the plurality of sensor values on the network layer. The system may include a means for providing haptic feedback to a haptic feedback device of a user in proximity to at least one of the industrial system or the network layer. The system may include a means for configuring the haptic feedback to provide an intuitive alert to the user.

In embodiments, a system for self-organizing data storage for data collected from a mine may comprise: a sensor communication circuit structured to interpret a plurality of sensor data values; a sensor data storage profile circuit structured to determine a data storage profile, the data storage profile comprising a data storage plan for the plurality of sensor data values; and a sensor data storage implementation circuit structured to store at least a portion of the plurality of sensor data values in response to the data storage profile. In embodiments, the system may include a self-organizing data storage for data collected from an assembly line, including: a sensor communication circuit structured to interpret a plurality of sensor data values; a sensor data storage profile circuit structured to determine a data storage profile, the data storage profile comprising a data storage plan for the plurality of sensor data values; and a sensor data storage implementation circuit structured to store at least a portion of the plurality of sensor data values in response to the data storage profile.

In embodiments, a system for self-organizing data storage for data collected from an agricultural system may comprise: a sensor communication circuit structured to interpret a plurality of sensor data values; a sensor data storage profile circuit structured to determine a data storage profile, the data storage profile comprising a data storage plan for the plurality of sensor data values; and a sensor data storage implementation circuit structured to store at least a portion of the plurality of sensor data values in response to the data storage profile.

In embodiments, a system for self-organizing data storage for data collected from an automotive robotic handling unit may comprise: a sensor communication circuit structured to interpret a plurality of sensor data values; a sensor data storage profile circuit structured to determine a data storage profile, the data storage profile comprising a data storage plan for the plurality of sensor data values; and a sensor data storage implementation circuit structured to store at least a portion of the plurality of sensor data values in response to the data storage profile.

In embodiments, a system for self-organizing data storage for data collected from an automotive system may comprise: a sensor communication circuit structured to interpret a plurality of sensor data values; a sensor data storage profile circuit structured to determine a data storage profile, the data storage profile comprising a data storage plan for the plurality of sensor data values; and a sensor data storage implementation circuit structured to store at least a portion of the plurality of sensor data values in response to the data storage profile.

In embodiments, a system for self-organizing data storage for data collected from an automotive robotic handling unit may include: a sensor communication circuit structured to interpret a plurality of sensor data values; a sensor data storage profile circuit structured to determine a data storage profile, the data storage profile comprising a data storage plan for the plurality of sensor data values; and a sensor data storage implementation circuit structured to store at least a portion of the plurality of sensor data values in response to the data storage profile.

In embodiments, a system for self-organizing data storage for data collected from an aerospace system may comprise: a sensor communication circuit structured to interpret a plurality of sensor data values; a sensor data storage profile circuit structured to determine a data storage profile, the data storage profile comprising a data storage plan for the plurality of sensor data values; and a sensor data storage implementation circuit structured to store at least a portion of the plurality of sensor data values in response to the data storage profile.

In embodiments, a system for self-organizing data storage for data collected from a railway may include: a sensor communication circuit structured to interpret a plurality of sensor data values; a sensor data storage profile circuit structured to determine a data storage profile, the data storage profile comprising a data storage plan for the plurality of sensor data values; and a sensor data storage implementation circuit structured to store at least a portion of the plurality of sensor data values in response to the data storage profile.

In embodiments, a system for self-organizing data storage for data collected from an oil and gas production system may comprise: a sensor communication circuit structured to interpret a plurality of sensor data values; a sensor data storage profile circuit structured to determine a data storage profile, the data storage profile comprising a data storage plan for the plurality of sensor data values; and a sensor data storage implementation circuit structured to store at least a portion of the plurality of sensor data values in response to the data storage profile.

In embodiments, a system for self-organizing data storage for data collected from a power generation system, the system comprising: a sensor communication circuit structured to interpret a plurality of sensor data values; a sensor data storage profile circuit structured to determine a data storage profile, the data storage profile comprising a data storage plan for the plurality of sensor data values; and a sensor data storage implementation circuit structured to store at least a portion of the plurality of sensor data values in response to the data storage profile.

In embodiments, methods and systems are provided for data collection in or relating to one or more machines deployed in an industrial environment using self-organized network coding for network transmission of sensor data in a network. In embodiments, network coding may be used to specify and manage the manner in which packets (including streams of packets as noted in various embodiments disclosed throughout this disclosure and the documents incorporated by reference) are relayed from a sender (e.g., a data collector, instrumentation system, computer, or the like in an industrial environment where data is collected, such as from sensors or instruments on, in or proximal to industrial machines or from data storage in the environment) to a receiver (e.g., another data collector (such as in a swarm or coordinated group), instrumentation system, computer, storage, or the like in the industrial environment, or to a remote computer, server, cloud platform, database, data pool, data marketplace, mobile device (e.g., mobile phone, personal computer, tablet, or the like), or other network-connected device of system), such as via one or more network infrastructure elements (referred to in some cases herein as nodes), such as access points, switches, routers, servers, gateways, bridges, connectors, physical interfaces and the like, using one or more network protocols, such as IP-based protocols, TCP/IP, UDP, HTTP, Bluetooth, Bluetooth Low Energy, cellular protocols, LTE, 2G, 3G, 4G, 5G, CDMA, TDSM, packet-based protocols, streaming protocols, file transfer protocols, broadcast protocols, multi-cast protocols, unicast protocols, and others. For situations involving bi-directional communication, any of the above-referenced devices or systems, or others mentioned throughout this disclosure, may play the role of sender or receiver, or both. Network coding may account for availability of networks, including the availability of multiple alternative networks, such that a transmission may be delivered across different networks, either separated into different components or sending the same components redundantly. Network coding may account for bandwidth and spectrum availability; for example, a given spectrum may be divided (such as with sub-dividing spectrum by frequency, by time-division multiplexing, and other techniques). Networks or components thereof may be virtualized, such as for purposes of provisioning of network resources, specification of network coding for a virtualized network, or the like. Network coding may include a wide variety of approaches as described here and in the incorporated documents.

In embodiments, one or more network coding systems or methods of the present disclosure may use self-organization, such as to configure network coding parameters for one or more transmissions over one or more networks using an expert system, which may comprise a model-based system (such as automatically selecting network coding parameters or configuration based on one or more defined or measured parameters relating to a transmission, such as parameters of the data or content to be transmitted, the sender, the receiver, the available network infrastructure components, the conditions of the network infrastructure, the conditions of the industrial environment, or the like). A model may, for example, account for parameters relating to file size, numbers of packets, size of a stream, criticality of a data packet or stream, value of a packet or stream, cost of transmission, reliability of a transmission, quality of service, quality of transmission, quality of user experience, financial yield, availability of spectrum, input/output speed, storage availability, storage reliability, and many others as noted throughout this disclosure. In embodiments, the expert system may comprise a rule-based system, where one or more rules is executed based on detection of a condition or parameter, calculation of a variable, or the like, such as based on any of the above-noted parameters. In embodiments, the expert system may comprise a machine learning system, such as a deep learning system, such as based on a neural network, a self-organizing map, or other artificial intelligence approach (including any noted throughout this disclosure or the documents incorporated by reference). A machine learning system in any of the embodiments of this disclosure may configure one or more inputs, weights, connections, functions (including functions of individual neurons or groups of neurons in a neural net) or other parameters of an artificial intelligence system. Such configuration may occur with iteration and feedback, optionally involving human supervision, such as by feeding back various metrics of success or failure. In the case of network coding, configuration may involve setting one or more coding parameters for a network coding specification or plan, such as parameters for selection of a network, selection one or more nodes, selection of data path, configuration of timers or timing parameters, configuration of redundancy parameters, configuration of coding types (including use of regenerating codes, such as for use of network coding for distributed storage, such as in peer-to-peer networks, such as a peer-to-peer network of data collectors, or a storage network for a distributed ledger, as noted elsewhere in this disclosure), coefficients for coding (including linear algebraic coefficients), parameters for random or near-random linear network coding (including generation of near random coefficients for coding), session configuration parameters, or other parameters noted in the network coding embodiments described below, throughout this disclosure, and in the documents incorporated herein by reference. For example, a machine learning system may configure the selection of a protocol for a transmission, the selection of what network(s) will be used, the selection of one or more senders, the selection of one or more routes, the configuration of one or more network infrastructure nodes, the selection of a destination receiver, the configuration of a receiver, and the like. In embodiments, each one of these may be configured by an individual machine learning system, or the same system may configure an overall configuration by adjusting various parameters of one or more of the above under iteration, through a series of trials, optionally seeded by a training set, which may be based on human configuration of parameters, or by model-based and/or rule-based configuration. Feedback to a machine learning system may comprise various measures, including transmission success or failure, reliability, efficiency (including cost-based, energy-based and other measures of efficiency, such as measuring energy per bit transmitted, energy per bit stored, or the like), quality of transmission, quality of service, financial yield, operational effectiveness, success at prediction, success at classification, and others. In embodiments, a machine learning system may configure network coding parameters by predicting network behavior or characteristics and may learn to improve prediction using any of the techniques noted above. In embodiments, a machine learning system may configure network coding parameters by classification of one or more network elements and/or one or more network behaviors and may learn to improve classification, such as by training and iteration over time. Such machine-based prediction and/or classification may be used for self-organization, including by model-based, rule-based, and machine learning-based configuration. Thus, self-organization of network coding may use or comprise various combinations or permutations of model-based systems, rule-based systems, and a variety of different machine-learning systems (including classification systems, prediction systems, and deep learning systems, among others).

As described in US patent application 2017/0013065, entitled "Cross-session network communication configuration," network coding may involve methods and systems for data communication over a data channel on a data path between a first node and a second node and may include maintaining data characterizing one or more current or previous data communication connections traversing the data channel and initiating a new data communication connection between the first node and the second node including configuring the new data communication connection at least in part according to the maintained data. The maintained data may characterize one or more data channels on one or more data paths between the first node and the second node over which said one or more current or previous data communication connections pass. The maintained data may characterize an error rate of the one or more data channels. The maintained data may characterize a bandwidth of the one or more data channels. The maintained data may characterize a round trip time of the one or more data channels. The maintained data may characterize communication protocol parameters of the one or more current or previous data communication connections.

The communication protocol parameters may include one or more of a congestion window size, a block size, an interleaving factor, a port number, a pacing interval, a round trip time, and a timing variability. The communication protocol parameters may include two or more of a congestion window size, a block size, an interleaving factor, a port number, a pacing interval, a round trip time, and a timing variability.

The maintained data may characterize forward error correction parameters associated with the one or more current or previous data communication connections. The forward error correction parameters may include a code rate. Initiating the new data communication connection may include configuring the new data communication connection according to first data of the maintained data, the first data is maintained at the first node, and initiating the new data communication connection includes providing the first data from the first node to the second node for configuring the new data communication connection.

Initiating the new data communication connection may include configuring the new data communication connection according to first data of the maintained data, the first data is maintained at the first node, and initiating the new data communication connection includes accessing first data at the first node for configuring the new data communication connection. Any one of these elements of maintained data, including various parameters of communication protocol, error correction parameters, connection parameters, and others, may be provided to the expert system for supporting self-organization of network coding, including for execution of rules to set network coding parameters based on the maintained data, for population of a model, or for configuration of parameters of a neural net or other artificial intelligence system.

Initiating the new data communication connection may include configuring the new data communication connection according to first data of the maintained data, the first data being maintained at the first node, and initiating the new data communication connection includes accepting a request from the first node for establishing the new data communication connection between the first node and the second node, including receiving, at the second node, at least one message from the first node comprising the first data for configuring said connection. The method may include maintaining the new data communication connection between the first node and the second node, including maintaining communication parameters, including initializing said communication parameters according the first data received in the at least one message from the first node.

Maintaining the new data communication connection may include adapting the communication parameters according to feedback from the first node. The feedback from the first node may include feedback messages received from the first node. The feedback may include feedback derived from a plurality of feedback messages received from the first node. Feedback may relate to any of the types of feedback noted above, and may be used for self-organizing the data communication connection using the expert system.

In some examples, one or more training communication connections over a data channel on a data path are employed prior to establishment of data communication connections over the data channel on the data path. The training communication connections are used to collect information about the data channel which is then used when establishing the data communication connections. In other examples, no training communication connections are employed and information about the data channel is obtained from one or more previous or current data communication connection over the data channel on the data path.

The present disclosure describes a method for data communication over a data channel on a data path between a first node and a second node, the method according to one disclosed non-limiting embodiment of the present disclosure can include maintaining data characterizing one or more current or previous data communication connections traversing the data channel, and initiating a new data communication connection between the first node and the second node including configuring the new data communication connection at least in part according to the maintained data, wherein the configuration of the new data communication connection is configured by an expert system.

In embodiments, the expert system uses at least one of a rule and a model to set a parameter of the configuration.

In embodiments, the expert system is a machine learning system that iteratively configures at least one of a set of inputs, a set of weights, and a set of functions based on feedback relating to the data channel.

In embodiments, the expert system takes a plurality of inputs from a data collector that accepts data about a machine operating in an industrial environment

As described in US patent application 2017/0012861, entitled "Multi-path network communication," self-organized network coding under control of an expert system may involve methods and systems for data communication between a first node and a second node over a number of data paths coupling the first node and the second node and may include transmitting messages between the first node and the second node over the number of data paths, including transmitting a first subset of the messages over a first data path of the number of data paths and transmitting a second subset of the messages over a second data path of the number of data paths. In situations where the first data path has a first latency and the second data path has a second latency substantially larger than the first latency, and messages of the first subset of the messages are chosen to have first message characteristics and messages of the second subset are chosen to have second message characteristics, different from the first message characteristics.

Messages having the first message characteristics, targeted for data paths of lower latency, may include time critical messages; for example, in an industrial environment, messages relating to a critical fault condition of a machine (e.g., overheating, excessive vibration, or any of the other fault conditions described throughout this disclosure) or relating to a safety hazard, or a time-critical operational step on which other processes depend (e.g., completion of a catalytic reaction, completion of a sub-assembly, or the like in a high-value, high-speed manufacturing process, a refining process, or the like) may be designated as time critical (such as by a rule that can be parsed or processed by a rules engine) or may be learned to be time-critical by the expert system, such as based on feedback regarding outcomes over time, including outcomes for similar machines having similar data in similar industrial environments. The first subset of the messages and the second subset of the messages may be determined from a portion of the messages available at the first node at a time of transmission. At a subsequent time of transmission, additional messages made available to the first node may be divided into the first subset and the second subset based on message characteristics associated with the additional messages. Division into subsets and selection of what subsets are targeted to what data path may be undertaken by an expert system. Messages having the first message characteristics may be associated with an initial subset of a data set and messages having the second message characteristics may be associated with a subsequent subset of the data set. The methods and systems described herein for selecting inputs for data collection and for multiplexing data may be organized, such as by an expert system, to configure inputs for the alternative channels, such as by providing streaming elements that have real-time significance to the first data path and providing other elements, such as for long-term, predictive maintenance, to the other data path. In embodiments, the messages of the second subset may include messages that are at most n messages ahead of a last acknowledged message in a sequential transmission order associated with the messages, wherein n is determined based on a buffer size at one of the first and second nodes.

Messages having the first message characteristics may include acknowledgement messages and messages having the second message characteristics may include data messages. Messages having the first message characteristics may include supplemental data messages. The supplemental data messages may include data messages may include redundancy data and messages having the second message characteristics may include original data messages. The first data path may include a terrestrial data path and the second data path may include a satellite data path. The terrestrial data path may include one or more of a cellular data path, a digital subscriber line (DSL) data path, a fiber optic data path, a cable internet based data path, and a wireless local area network data path. The satellite data path may include one or more of a low earth orbit satellite data path, a medium earth orbit satellite data path, and a geostationary earth orbit satellite data path. The first data path may include a medium earth orbit satellite data path or a low earth orbit satellite data path and the second data path may include a geostationary orbit satellite data path.

The method may further include, for each path of the number of data paths, maintaining an indication of successful and unsuccessful delivery of the messages over the data path and adjusting a congestion window for the data path based on the indication, which may occur under control of an expert system, including based on feedback of outcomes of a set of transmissions. The method may further include, for each path of the number of data paths, maintaining, at the first node, an indication of whether a number of messages received at the second node is sufficient to decode data associated with the messages, wherein the indication is based on feedback received at the first node over the number of data paths.

In another general aspect, a system for data communication between a number of nodes over a number of data paths coupling the number of nodes includes a first node configured to transmit messages to a second node over the number of data paths including transmitting a first subset of the messages over a first data path of the number of data paths, and transmitting a second subset of the messages over a second data path of the number of data paths.

In embodiments, the first subset of the messages and the second subset of the messages for the respective data paths may be determined from a portion of the messages available at a first node at a time of transmission. At a subsequent time of transmission, additional messages made available to the first node may be divided into a first subset and a second subset based on message characteristics associated with the additional messages. Messages having the first message characteristics may be associated with an initial subset of a data set and messages having the second message characteristics may be associated with a subsequent subset of the data set.

In embodiments, the messages of the second subset may include messages that are at most n messages ahead of a last acknowledged message in a sequential transmission order associated with the messages, wherein n is determined based on a receive buffer size at the second node. Messages having the first message characteristics may include acknowledgement messages and messages having the second message characteristics may include data messages. Messages having the first message characteristics may include supplemental data messages. The supplemental data messages may include data messages including redundancy data and messages having the second message characteristics may include original data messages.

The first node may be further configured to, for each path of the number of data paths, maintain an indication of successful and unsuccessful delivery of the messages over the data path and adjust a congestion window for the data path based on the indication. The first node may be further configured to maintain an aggregate indication of whether a number of messages received at the second node over the number of data paths is sufficient to decode data associated with the messages and to transmit supplemental messages based on the aggregate indication, wherein the aggregate indication is based on feedback from the second node received at the first node over the number of data paths.

The present disclosure describes a method for data communication between a first node and a second node over a plurality of data paths coupling the first node and the second node, the method according to one disclosed non-limiting embodiment of the present disclosure can include transmitting messages between the first node and the second node over the plurality of data paths including transmitting a first subset of the messages over a first data path of the plurality of data paths, and transmitting a second subset of the messages over a second data path of the plurality of data paths, wherein the first data path has a first latency and the second data path has a second latency substantially larger than the first latency, and messages of the first subset of the messages are chosen to have first message characteristics and messages of the second subset are chosen to have second message characteristics, different from the first message characteristics, wherein the selection of the first and second subset of message characteristics is performed automatically under control of an expert system.

In embodiments, the expert system uses at least one of a rule and a model to set a parameter of the selection.

In embodiments, the expert system is a machine learning system that iteratively configures at least one of a set of inputs, a set of weights, and a set of functions based on feedback relating to at least one of the data paths.

In embodiments, the expert system takes a plurality of inputs from a data collector that accepts data about a machine operating in an industrial environment.

As described in US patent application 2017/0012868, entitled "Multiple protocol network communication," self-organized network coding under control of an expert system may involve methods and systems for data communication between a first node and a second node over one or more data paths coupling the first node and the second node and may include transmitting messages between the first node and the second node over the data paths, including transmitting at least some of the messages over a first data path using a first communication protocol, transmitting at least some of the messages over a second data path using a second communication protocol, determining that the first data path is altering a flow of messages over the first data path due to the messages being transmitted using the first communication protocol, and in response to the determining, adjusting a number of messages sent over the data paths, including decreasing a number of the messages transmitted over the first data path and increasing a number of messages transmitted over the second data path. Determination that the first data path is altering a flow of messages and/or adjusting the number of messages sent over the data paths may occur under control of an expert system, such as a rule-based system, a model-based system, a machine learning system (including deep learning) or a hybrid of any of those, where the expert system takes inputs relating to one or more of the data paths, the nodes, the communication protocols used, or the like. The data paths may be among devices and systems in an industrial environment, such as instrumentation systems of industrial machines, one or more mobile data collectors (optionally coordinated in a swarm), data storage systems (including network-attached storage), servers and other information technology elements, any of which may have or be associated with one or more network nodes. The data paths may be among any such devices and systems and devices and systems in a network of any kind (such as switches, routers, and the like) or between those and ones located in a remote environment, such as in an enterprise's information technology system, in a cloud platform, or the like.

Determining that the first data path is altering the flow of messages over the first data path may include determining that the first data path is limiting a rate of messages transmitted using the first communication protocol. Determining that the first data path is altering the flow of messages over the first data path may include determining that the first data path is dropping messages transmitted using the first communication protocol at a higher rate than a rate at which the second data path is dropping messages transmitted using the second communication protocol. The first communication protocol may be the User Datagram Protocol (UDP), and the second communication protocol may be the Transmission Control Protocol (TCP), or vice versa. Other protocols as described throughout this disclosure may be used.

The messages may be initially equally divided or divided according to some predetermined allocation (such as by type, as noted in connection with other embodiments) across the first data path and the second data path, such as using a load balancing technique. The messages may be initially divided across the first data path and the second data path according to a division of the messages across the first data path and the second data path in one or more prior data communication connections. The messages may be initially divided across the first data path and the second data path based on a probability that the first data path will alter a flow of messages over the first data path due to the messages being transmitted using the first communication protocol.

The messages may be divided across the first data path and the second data path based on message type. The message type may include one or more of acknowledgement messages, forward error correction messages, retransmission messages, and original data messages. Decreasing a number of the messages transmitted over the first data path and increasing a number of messages transmitted over the second data path may include sending all of the messages over the second path and sending none of the messages over the first path.

At least some of the number of data paths may share a common physical data path. The first data path and the second data path may share a common physical data path. The adjusting of the number of messages sent over the number of data paths may occur during an initial phase of the transmission of the messages. The adjusting of the number of messages sent over the number of data paths may repeatedly occur over a duration of the transmission of the messages. The adjusting of the number of messages sent over the number of data paths may include increasing a number of the messages transmitted over the first data path and decreasing a number of messages transmitted over the second data path.

In some examples, the parallel transmission over TCP and UDP is handled differently from conventional load balancing techniques, because TCP and UDP both share a low-level data path and nevertheless have very different protocol characteristics.

In some examples, approaches respond to instantaneous network behavior and learn the network's data handling policy and state by probing for changes. In an industrial environment, this may include learning policies relating to authorization to use aspects of a network; for example, a SCADA system may allow a data path to be used only by a limited set of authorized users, services, or applications, because of the sensitivity of underlying machines or processes that are under control (including remote control) via the SCADA system and concern over potential for cyberattacks. Unlike conventional load-balancers, which assume each data path is unique and does not affect the other, approaches may recognize that TCP and UDP share a low-level data path and directly affect each other. Additionally, TCP provides in-order delivery and retransmits data (along with flow control, congestion control, etc.) whereas UDP does not. This uniqueness requires additional logic provided by the methods and systems disclosed herein that may include mapping specific message types to each communication protocol, such as based at least in part on the different properties of the protocols (e.g., expect longer jitter over TCP, expect out-of-order delivery on UDP). For example, the system may refrain from coding over packets sent through TCP, since it is reliable, but may send forward error correction over UDP to add redundancy and save bandwidth. In some examples, a larger ACK interval is used for ACKing TCP data.

By employing the techniques described herein, approaches distribute data over TCP and UDP data paths to achieve optimal or near-optimal throughput, such as in situations where a network provider's policies treat UDP unfairly (as compared to conventional systems that simply use UDP if possible and fall back to TCP if not).

A method for data communication between a first node and a second node over a plurality of data paths coupling the first node and the second node, the method comprising:

transmitting messages between the first node and the second node over the plurality of data paths including transmitting at least some of the messages over a first data path of the plurality of data paths using a first communication protocol, and transmitting at least some of the messages over a second data path of the plurality of data paths using a second communication protocol;

determining that the first data path is altering a flow of messages over the first data path due to the messages being transmitted using the first communication protocol, and in response to the determining, adjusting a number of messages sent over the plurality of data paths including decreasing a number of the messages transmitted over the first data path and increasing a number of messages transmitted over the second data path, wherein altering the flow of messages is performed automatically under control of an expert system.

In embodiments, the expert system uses at least one of a rule and a model to set a parameter of the alteration of the flow.

In embodiments, the expert system is a machine learning system that iteratively configures at least one of a set of inputs, a set of weights, and a set of functions based on feedback relating to at least one of the data paths.

In embodiments, the expert system takes a plurality of inputs from a data collector that accepts data about a machine operating in an industrial environment.

In embodiments, the first communication protocol is User Datagram Protocol (UDP).

In embodiments, the second communication protocol is Transmission Control Protocol (TCP).

In embodiments, the messages are initially divided across the first data path and the second data path using a load balancing technique.

In embodiments, the messages are initially divided across the first data path and the second data path according to a division of the messages across the first data path and the second data path in one or more prior data communication connections.

In embodiments, the messages are initially divided across the first data path and the second data path based on a probability that the first data path will alter a flow of messages over the first data path due to the messages being transmitted using the first communication protocol.

In embodiments, the probability is determined by an expert system.

As described in US patent application 2017/0012884, entitled "Message reordering timers," self-organized network coding under control of an expert system may involve methods and systems for data communication from a first node to a second node over a data channel coupling the first node and the second node and may include receiving data messages at the second node, the messages belonging to a set of data messages transmitted in a sequential order from the first node, sending feedback messages from the second node to the first node, the feedback messages characterizing a delivery status of the set of data messages at the second node, including maintaining a set of one or more timers according to occurrences of a number of delivery order events, the maintaining including modifying a status of one or more timers of the set of timers based on occurrences of the number of delivery order events, and deferring sending of said feedback messages until expiry of one or more of the set of one or more timers. The data channels may be among devices and systems in an industrial environment, such as instrumentation systems of industrial machines, one or more mobile data collectors (optionally coordinated in a swarm), data storage systems (including network-attached storage), servers and other information technology elements, any of which may have or be associated with one or more network nodes. The data channels may be among any such devices and systems and devices and systems in a network of any kind (such as switches, routers, and the like) or between those and ones located in a remote environment, such as in an enterprise's information technology system, in a cloud platform, or the like. Determination that that timers are required, configuration of timers, and initiation of the user of timers may occur under control of an expert system, such as a rule-based system, a model-based system, a machine learning system (including deep learning) or a hybrid of any of those, where the expert system takes inputs relating to one or more of the types of communications occurring, the data channels, the nodes, the communication protocols used, or the like.

The set of one or more timers may include a first timer and the first timer may be started upon detection of a first delivery order event, the first delivery order event being associated with receipt of a first data message associated with a first position in the sequential order prior to receipt of one or more missing messages associated with positions preceding the first position in the sequential order. The method may include sending the feedback messages indicating a successful delivery of the set of data messages at the second node upon detection of a second delivery order event, the second delivery order event being associated with receipt of the one or more missing messages prior to expiry of the first timer. The method may include sending said feedback messages indicating an unsuccessful delivery of the set of data messages at the second node upon expiry of the first timer prior to any of the one or more missing messages being received. The set of one or more timers may include a second timer and the second timer is started upon detection of a second delivery order event, the second delivery order event being associated with receipt of some but not all of the missing messages prior to expiry of the first timer. The method may include sending feedback messages indicating an unsuccessful delivery of the set of data messages at the second node upon expiry of the second timer prior to receipt of the missing messages. The method may include sending feedback messages indicating a successful delivery of the set of data messages at the second node upon detection of a third delivery order event, the third delivery order event being associated with receipt of the missing messages prior to expiry of the second timer.

In another general aspect, a method for data communication from a first node to a second node over a data channel coupling the first node and the second node includes receiving, at the first node, feedback messages indicative of a delivery status of a set of data messages transmitted in a sequential order to the second node from the second node, maintaining a size of a congestion window at the first node including maintaining a set of one or more timers according to occurrences of a number of feedback events, the maintaining including modifying a status of one or more timers of the set of timers based on occurrences of the number of feedback events, and delaying modification of the size of the congestion window until expiry of one or more of the set of one or more timers.

The set of one or more timers may include a first timer and the first timer may be started upon detection of a first feedback event, the first feedback event being associated with receipt of a first feedback message indicating successful delivery of a first data message having first position in the sequential order prior to receipt of one or more feedback messages indicating successful delivery of one or more other data messages having positions preceding the first position in the sequential order. The method may include cancelling modification of the congestion window upon detection of a second feedback event, the second feedback event being associated with receipt of one or more feedback messages indicating successful delivery of the one or more other data messages prior to expiry of the first timer. The method may include modifying the congestion window upon expiry of the first timer prior to receipt of any feedback message indicating successful delivery of the one or more other data messages.

The set of one or more timers may include a second timer and the second timer may be started upon detection of a third feedback event, the third feedback event being associated with receipt of one or more feedback messages indicating successful delivery of some but not all of the one or more other data messages prior to expiry of the first timer. The method may include modifying the size of the congestion window upon expiry of the second timer prior to receipt of one or more feedback messages indicating successful delivery of the one or more other data messages. The method may include cancelling modification of the size of the congestion window upon detection of a fourth feedback event, the fourth feedback event being associated with receipt one or more feedback messages indicating successful delivery of the one or more other data messages prior to expiry of the second timer.

In another general aspect, a system for data communication between a number of nodes over a data channel coupling the number of nodes includes a first node of the number of nodes configured to receive, at the first node, feedback messages indicative of a delivery status of a set of data messages transmitted in a sequential order to the second node from the second node, maintain a size of a congestion window at the first node including maintaining a set of one or more timers according to occurrences of a number of feedback events, the maintaining including modifying a status of one or more timers of the set of timers based on occurrences of the number of feedback events, and delaying modification of the size of the congestion window until expiry of one or more of the set of one or more timers.

The present disclosure describes a method for data communication from a first node to a second node over a data channel coupling the first node and the second node, the method according to one disclosed non-limiting embodiment of the present disclosure can include determining, using an expert system, based on at least one condition of the data channel, whether one or more timers will be used to manage the data communication and, upon such determination receiving data messages at the second node, the messages belonging to a set of data messages transmitted in a sequential order from the first node, sending feedback messages from the second node to the first node, the feedback messages characterizing a delivery status of the set of data messages at the second node, including maintaining a set of one or more timers according to occurrences of a plurality of delivery order events, the maintaining including modifying a status of one or more timers of the set of timers based on occurrences of the plurality of delivery order events, and deferring sending of said feedback messages until expiry of one or more of the set of one or more timers.

In embodiments, the expert system uses at least one of a rule and a model to set a parameter of the determination whether to use one or more timers.

In embodiments, the expert system is a machine learning system that iteratively configures at least one of a set of inputs, a set of weights, and a set of functions based on feedback relating to at least one of the data paths.

In embodiments, the expert system takes a plurality of inputs from a data collector that accepts data about a machine operating in an industrial environment.

In embodiments, the set of one or more timers includes a first timer and the first timer is started upon detection of a first delivery order event, the first delivery order event being associated with receipt of a first data message associated with a first position in the sequential order prior to receipt of one or more missing messages associated with positions preceding the first position in the sequential order.

As described in US patent application 2017/0012885, entitled, "Network Communication Recoding Node," self-organized network coding under control of an expert system may involve methods and systems for modifying redundancy information associated with encoded data passing from a first node to a second node over data paths and may include receiving first encoded data including first redundancy information at an intermediate node from the first node via a first channel connecting the first node and the intermediate node, the first channel having first channel characteristics, and transmitting second encoded data including second redundancy information from the intermediate node to the second node via a second channel connecting the intermediate node and the second node, the second channel having second channel characteristics. A degree of redundancy associated with the second redundancy information may be determined by modifying the first redundancy information based on one or both of the first channel characteristics and the second channel characteristics without decoding the first encoded data. The data paths may be among devices and systems in an industrial environment (each acting as one or more nodes for sending, receiving, or transmitting data), such as instrumentation systems of industrial machines, one or more mobile data collectors (optionally coordinated in a swarm), data storage systems (including network-attached storage), servers and other information technology elements, any of which may have or be associated with one or more network nodes. The data paths may be among any such devices and systems and devices and systems in a network of any kind (such as switches, routers, and the like) or between those and ones located in a remote environment, such as in an enterprise's information technology system, in a cloud platform, or the like. Modifying the redundancy information may occur by or under control of an expert system, such as a rule-based system, a model-based system, a machine learning system (including deep learning) or a hybrid of any of those, where the expert system takes inputs relating to one or more of the data paths, the nodes, the communication protocols used, or the like. Redundancy may result from (and may be identified at least in part based on), the combination or multiplexing of data from a set of data inputs, such as described throughout this disclosure.

Modifying the first redundancy information may include adding redundancy information to the first redundancy information. Modifying the first redundancy information may include removing redundancy information from the first redundancy information. The second redundancy information may be further formed by modifying the first redundancy information based on feedback from the second node indicative of successful or unsuccessful delivery of the encoded data to the second node. The first encoded data and the second encoded data may be encoded, such as using a random linear network code or a substantially random linear network code. Modifying the first redundancy information based on one or both of the first channel characteristics and the second channel characteristics may include modifying the first redundancy information based on one or more of a block size, a congestion window size, and a pacing rate associated with the first channel characteristics and/or the second channel characteristics.

The method may include sending a feedback message from the intermediate node to the first node acknowledging receipt of one or more messages at the intermediate node. The method may include receiving a feedback message from the second node at the intermediate node and, in response to receiving the feedback message, transmitting additional redundancy information to the second node.

In another general aspect, a system for modifying redundancy information associated with encoded data passing from a first node to a second node over a number of data paths includes an intermediate node configured to receive first encoded data including first redundancy information from the first node via a first channel connecting the first node and the intermediate node, the first channel having first channel characteristics and transmit second encoded data including second redundancy information from the intermediate node to the second node via a second channel connecting the intermediate node and the second node, the second channel having second channel characteristics. A degree of redundancy associated with the second redundancy information is determined by modifying the first redundancy information based on one or both of the first channel characteristics and the second channel characteristics without decoding the first encoded data.

The present disclosure describes a method for modifying redundancy information associated with encoded data passing from a first node to a second node over a plurality of data paths, the method according to one disclosed non-limiting embodiment of the present disclosure can include receiving first encoded data including first redundancy information at an intermediate node from the first node via a first channel connecting the first node and the intermediate node, the first channel having first channel characteristics, transmitting second encoded data including second redundancy information from the intermediate node to the second node via a second channel connecting the intermediate node and the second node, the second channel having second channel characteristics, wherein a degree of redundancy associated with the second redundancy information is determined by modifying the first redundancy information based on one or both of the first channel characteristics and the second channel characteristics without decoding the first encoded data, including modifying the first redundancy information based on one or more of a block size, a congestion window size, and a pacing rate associated with the first channel characteristics and/or the second channel characteristics, wherein modifying the first redundancy information occurs under control of an expert system.

In embodiments, the expert system uses at least one of a rule and a model to set a parameter of the modification of the redundancy information.

In embodiments, the expert system is a machine learning system that iteratively configures at least one of a set of inputs, a set of weights, and a set of functions based on feedback relating to at least one of the data paths.

In embodiments, the expert system takes a plurality of inputs from a data collector that accepts data about a machine operating in an industrial environment.

In embodiments, modifying the first redundancy information includes adding redundancy information to the first redundancy information.

In embodiments, modifying the first redundancy information includes removing redundancy information from the first redundancy information.

In embodiments, the second redundancy information is further formed by modifying the first redundancy information based on feedback from the second node indicative of successful or unsuccessful delivery of the encoded data to the second node.

In embodiments, the first encoded data and the second encoded data are encoded using a random linear network code.

As described in US patent application 2017/0012905, entitled "Error correction optimization," self-organized network coding under control of an expert system may involve methods and systems for data communication between a first node and a second node over a data path coupling the first node and the second node and may include transmitting a segment of data from the first node to the second node over the data path as a number of messages, the number of messages being transmitted according to a transmission order. A degree of redundancy associated with each message of the number of messages is determined based on a position of said message in the transmission order. The data paths may be among devices and systems in an industrial environment (each acting as one or more nodes for sending, receiving, or transmitting data), such as instrumentation systems of industrial machines, one or more mobile data collectors (optionally coordinated in a swarm), data storage systems (including network-attached storage), servers and other information technology elements, any of which may have or be associated with one or more network nodes. The data paths may be among any such devices and systems and devices and systems in a network of any kind (such as switches, routers, and the like) or between those and ones located in a remote environment, such as in an enterprise's information technology system, in a cloud platform, or the like. Determining a transmission order may occur by or under control of an expert system, such as a rule-based system, a model-based system, a machine learning system (including deep learning) or a hybrid of any of those, where the expert system takes inputs relating to one or more of the data paths, the nodes, the communication protocols used, or the like. Redundancy may result from (and may be identified at least in part based on), the combination or multiplexing of data from a set of data inputs, such as described throughout this disclosure.

The degree of redundancy associated with each message of the number of messages may increase as the position of the message in the transmission order is non-decreasing. Determining the degree of redundancy associated with each message of the number of messages based on the position (i) of the message in the transmission order is further based on one or more of delay requirements for an application at the second node, a round trip time associated with the data path, a smoothed loss rate (P) associated with the channel, a size (N) of the data associated with the number of messages, a number $(a_i)$ of acknowledgement messages received from the second node corresponding to messages from the number of messages, a number $(f_i)$ of in-flight messages of the number of messages, and an increasing function $(g(i))$ based on the index of the data associated with the number of messages.

The degree of redundancy associated with each message of the number of messages may be defined as: $(N+g(i)-a_i)/(1-p)-f_i$. $g(i)$ may be defined as a maximum of a parameter m and N-i. $g(i)$ may be defined as N-p(i) where p is a polynomial, with integer rounding as needed. The method may include receiving, at the first node, a feedback message from the second node indicating a missing message at the second node and, in response to receiving the feedback message, sending a redundancy message to the second node to increase a degree of redundancy associated with the missing message. The method may include maintaining, at the first node, a queue of preemptively computed redundancy messages and, in response to receiving the feedback message, removing some or all of the preemptively computed redundancy messages from the queue and adding the redundancy message to the queue for transmission. The redundancy message may be generated and sent on-the-fly in response to receipt of the feedback message.

The method may include maintaining, at the first node, a queue of preemptively computed redundancy messages for the number of messages and, in response to receiving a feedback message indicating successful delivery of the number of messages, removing any preemptively computed redundancy messages associated with the number of messages from the queue of preemptively computed redundancy messages. The degree of redundancy associated with each of the messages may characterize a probability of correctability of an erasure of the message. The probability of correctability may depend on a comparison of between the degree of redundancy and a loss probability.

The present disclosure describes a method for data communication between a first node and a second node over a data path coupling the first node and the second nod, the method according to one disclosed non-limiting embodiment of the present disclosure can include transmitting a segment of data from the first node to the second node over the data path as a plurality of messages, the plurality of messages being transmitted according to a transmission order, wherein a degree of redundancy associated with each message of the plurality of messages is determined based on a position of said message in the transmission order, wherein the transmission order is determined under control of an expert system.

In embodiments, the expert system uses at least one of a rule and a model to set a parameter of the transmission order.

In embodiments, the expert system is a machine learning system that iteratively configures at least one of a set of inputs, a set of weights, and a set of functions based on feedback relating to at least one of the data paths.

In embodiments, the expert system takes a plurality of inputs from a data collector that accepts data about a machine operating in an industrial environment.

In embodiments, the degree of redundancy associated with each message of the plurality of messages increases as the position of the message in the transmission order is non-decreasing.

In embodiments, determining the degree of redundancy associated with each message of the plurality of messages based on the position (i) of the message in the transmission order is further based on one or more of application delay requirements, a round trip time associated with the data path, a smoothed loss rate (P) associated with the channel, a size (N) of the data associated with the plurality of messages, a number (ai) of acknowledgement messages received from the second node corresponding to messages from the plurality of messages, a number (fi) of in-flight messages of the plurality of messages, and an increasing function (g(i)) based on the index of the data associated with the plurality of messages.

As described in US patent application 14/935,885, entitled, "Packet Coding Based Network Communication," self-organized network coding under control of an expert system may involve methods and systems for data communication between a first node and a second node over a path and may include estimating a rate at which loss events occur, where a loss event is either an unsuccessful delivery of a single packet to the second data node or an unsuccessful delivery of a plurality of consecutively transmitted packets to the second data node, and sending redundancy messages at the estimated rate at which loss events occur. An expert system may be used to estimate the rate at which loss events occur.

A method for data communication from a first node to a second node over a data channel coupling the first node and the second node such as in an industrial environment, includes receiving messages at the first node, from the second node, including receiving messages comprising data that depend at least in part of characteristics of the channel coupling the first node and the second node, transmitting messages from the first node to the second node, including applying forward error correction according to parameters determined from the received messages, the parameters determined from the received messages including at least two of a block size, an interleaving factor, and a code rate. The method may occur under control of an expert system.

The present disclosure describes a method for data communication from a first node in an industrial environment to a second node over a data channel coupling the first node and the second node, the method according to one disclosed non-limiting embodiment of the present disclosure can include receiving messages at the first node from the second node, including receiving messages including data that depend at least in part of characteristics of the channel coupling the first node and the second node, transmitting messages from the first node to the second node, including applying error correction according to parameters determined from the received messages, the parameters determined from the received messages including at least two of a block size, an interleaving factor, and a code rate, wherein applying the error correction occurs under control of an expert system.

In embodiments, the expert system uses at least one of a rule and a model to set a parameter of the error correction.

In embodiments, the expert system is a machine learning system that iteratively configures at least one of a set of inputs, a set of weights, and a set of functions based on feedback relating to at least one of the data paths.

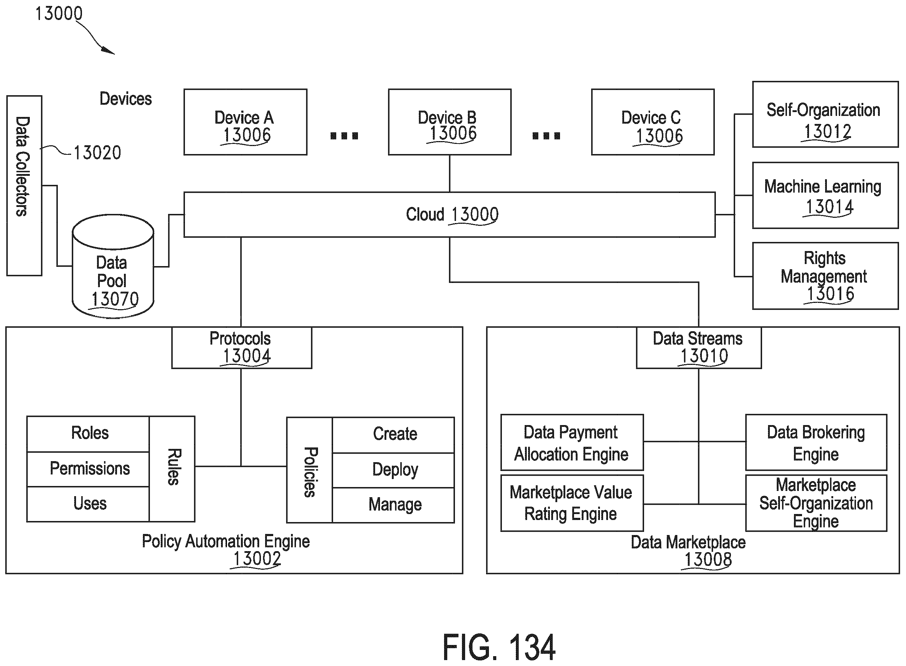

As depicted in Figure 134, a cloud platform for supporting deployments of devices in the Internet of Things (IoT), such as within industrial environments, may include various components, modules, services, elements, applications, interfaces, and other elements (collectively referred to as the "cloud platform 13000"), which may include a policy automation engine 13002 and a data marketplace 13008. The cloud platform 13000 may include, integrate with, or connect to various devices 13006, a cloud computing environment 13068, data pools 13070, data collectors 13020 and sensors 13024. The cloud platform 13000 may also include systems and capabilities for self-organization 13012, machine learning 13014 and rights management 13016.

Within the cloud platform 13000, various components may be deployed in a wide range of architectures and arrangements. In embodiments, devices 13006 may connect to, integrate with, or be deployed within a cloud computing environment 13068, the policy automation engine 13002, the data marketplace 13008, the data collectors 13020, as well as systems and capabilities for self-organization 13012, machine learning 13014 and rights management 13016. Devices 13006 may connect to or integrate with the policy automation engine 13002, data marketplace 13008, data collectors 13020 and systems or capabilities for self-organization 13012, machine learning 13014 and rights management 13016, either directly or through the cloud computing environment 13068.

Devices 13006 may be IoT devices, including IoT devices, such as for collecting, exchanging and managing information relating to machines, personnel, equipment, infrastructure elements, components, parts, inventory, assets, and other features of a wide range of industrial environments, such as those described throughout this disclosure. Devices 13006 may also connect via various protocols 13004, such as networking protocols, streaming protocols, file transfer protocols, data transformation protocols, software operating system protocols, and the like. Devices may connect to the policy automation engine 13002, such as for executing policies that may be deployed within the cloud platform 13000, such as governing activities, permissions, rules, and the like within the platform 13000. Devices 13006 may also connect to data streams 13010 within the data marketplace 13008.

Data pools 13070 may connect to or integrate with the cloud computing environment 13068, data collectors 13020 and the data marketplace 13008, policy automation engine 13002, self-organization 13012, machine learning 13014 and rights management 13016 capabilities. Data pools 13070 may be included within the cloud computing environment 30 or be external to the cloud computing environment 13068. As a result, connections to the data pools 13070 may be made directly to the data pools 13070, through cloud connections to the data pools 13070 or through a combination of direct and cloud connections to the data pools 13070. Data pools 13070 may also be included within the data marketplace 13008 or external to the data marketplace 13008.

Data pools 13070 may include a multiplexer (MUX) 13022 and also connect to self-organization 13012, machine learning 13014 and rights management capabilities. The MUX 13022 may connect to sensors 13024, collect data from sensors 13024 and integrate data collected from sensors 13024 into a single set of data. In an exemplary and non-limiting embodiment, data pools 13070, data collectors 13020 and sensors 13024 may be included within an industrial environment 13018.

A policy automation engine 13002 and data marketplace 13008 may be used in a variety of industrial environments 13018. Industrial environments 13018 may include aerospace environments, agriculture environment, assembly line environments, automotive environments, and chemical and pharmaceutical environments. Industrial environments 13018 may also include food processing environments, industrial component environments, mining environments, oil and gas environments, particularly oil and gas production environments, truck and car environments and the like.

Similarly, devices 13006 may include a variety of devices that may operate within the industrial environments or that may collect data with respect to other such devices. Among many examples, devices 13006 may include agitators, including turbine agitators, airframe control surface vibration devices, catalytic reactors and compressors. Devices 13006 may also include conveyors and lifters, disposal systems, drive trains, fans, irrigation systems and motors. Devices 13006 may also include pipelines, electric powertrains, production platforms, pumps, such as water pumps, robotic assembly systems, thermic heating systems, tracks, transmission systems and turbines. Devices 13006 may operate within a single industrial environment 13018 or multiple industrial environments 13018. For example, a pipeline device may operate within an oil and gas environment, while a catalytic reactor may operate in either an oil and gas production environment or a pharmaceutical environment.

The policy automation engine 13002 may be a cloud-based policy automation engine 13002. A policy automation engine 13002 may be used to create, deploy, and/or manage an interconnected set of policies 13030, rules 13028 and protocols 13004, such as policies relating to security, authorization, permissions, and the like. For example, policies may govern what users, applications, services, systems, devices, or the like may access an IoT device, may read data from an IoT device, may subscribe to a stream from an IoT device, may write data to an IoT device, may establish a network connection with an IoT device, may provision an IoT device, may collaborate with an IoT device, or the like.

The policy automation engine 13002 may generate and manage policies 13030. The policy generation engine may be the centralized policy management system for the cloud platform 13000.

Policies 13030 generated and managed by the policy automation engine 13002 may deploy a large number of rules 13028 to permit access to and use of different aspects of IoT devices. Policies 13030 may include IoT device creation policies 13032, IoT device deployment policies 13034, IoT device management policies 13036 and the like. The policies 13030 may be communicated to devices 13006 through protocols 13004 or directly from the policy automation engine 13002.

For example, in an exemplary and non-limiting embodiment, the policy automation engine 13002 may manage policies 13030 and create protocols 13004 that specify and enforce roles 13026 and permissions 13074 for workers, related to how the workers may use data provided by IoT devices. Workers may be human workers or machine workers.

In additional exemplary and non-limiting embodiments, policies 13030 may be used to automate remediation processes. Remediation processes may be performed when a system is partially disabled, when equipment fails and when an entire system may be disabled. Remediation processes may include instructions to initiate system restarts, bypass or replace equipment, notify appropriate stakeholders of the condition and the like. The policy automation engine 13002 may also include policies 13030 that specify the roles 13026 and permissions 13074 required for users 13072 to initiate or otherwise act upon the remediation or other processes.

The policy automation engine 13002 may also specify and detect conditions. Conditions may determine when policies 13030 are distributed or otherwise acted upon. Conditions may include individual conditions, sets of conditions, independent conditions, interdependent conditions, and the like.

In an exemplary and non-limiting embodiment of an independent condition, the policy automation engine 13002 may determine that the failure of a non-critical device 13006 does not require notification of the system operator. In an exemplary and non-limiting embodiment of an interdependent set of conditions, the policy automation engine 13002 may determine that the failure of two non-critical system devices 13006 does require notification of the system operator, as the failure of two non-critical system devices 13006 may be an early indicator of a possible system-wide failure.

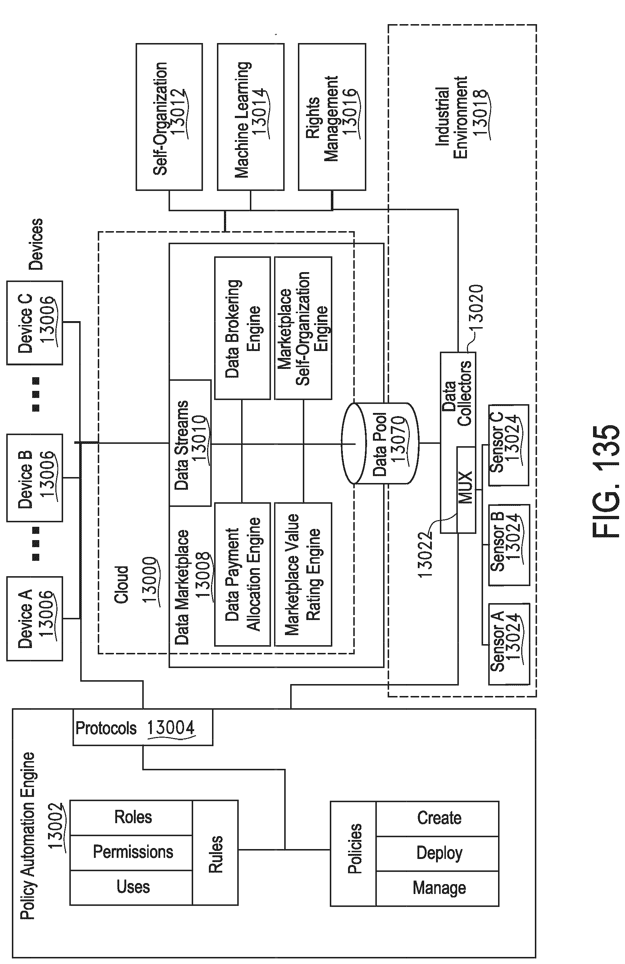

As depicted in Figure 135, the policy automation engine 13002 may include compliance policies 13050 and fault, configuration, accounting, provisioning, and security (FCAPS) policies 13052. Policies 13030 may connect to rules 13028, protocols 13004 and policy inputs 13048.

Policies 13030 may provide input to rules 13028 and provide information related to how roles 13026, permissions 13074 and uses 130280 are defined. Policies 13030 may receive policy inputs 13048 and incorporate policy inputs 13048 as policy parameters that are included within policies 13030. Policies 13030 may provide inputs to protocols 13004 and be included within protocols 13004 that are used to create, deploy and manage devices 13006.

Compliance policies 13050 may include data ownership policies, data analysis policies, data use policies, data format policies, data transmission policies, data security policies, data privacy policies, information sharing policies, jurisdictional policies, and the like. Data transmission policies may include cross-jurisdictional data transmission policies.

Data ownership policies may indicate policies 13030 that manage who controls data, who can use data, how the data can be used and the like. Data analysis policies may indicate what data holders can do with data that they are permitted to access, as well as determine what data they can look at and what data may be combined with other data. For example, a data holder may look at aggregated user data but not individual user data. Data use policies may indicate how data may be used and under what circumstances data may be used. Data format policies may indicate standard formats and mandated formats permitted for the handling of data. Data transmission policies, including cross-jurisdictional data transmission policies, may determine the policies 13030 that specify how inter-jurisdictional and intra-jurisdictional transmission of data may be handled. Data security policies may determine how data at rest, for example stored data, as well transmitted data is required to be secured.

Data privacy policies may determine how data may or may not be shared, for example within an organization and external to an organization. Information sharing policies may determine how data may be sold, shared and under what circumstances information can be sold and shared. Jurisdictional policies may determine who controls data, when and where the data may be controlled, for data within and transmitted across boundaries.

FCAPS policies 13052 may include fault management policies, configuration management policies, accounting management policies, provisioning management policies, and security management policies. Fault management policies may specify policies 13030 used to handle device faults. Configuration management policies may specify policies used to configure devices 13006. Accounting management policies may specify policies 13030 used for device accounting purposes, such as reporting, billing and the like. Provisioning management policies may specify policies 13030 used to provision services on devices 13006. Security management policies may specify policies 13030 used to secure devices 13006.

Policy inputs 13048 may be received from a policy input interface 13046. Policy inputs 13048 may include standards-based policy inputs 13044 and other policy inputs 13048. Standards-based policy inputs 13044 may include inputs related to standard data formats, standard rule sets and other standards-related information set by standards bodies, for example.

Other policy inputs 13048 may include a wide range of information related industry-specific policies, cross-industry policies, manufacturer-specific policies, device-specific policies 13030 and the like. Policy inputs 13048 may connect to a cloud computing environment 13068 and be provided through a policy input interface 13046. The policy input interface 13046 may collect policy inputs 13048 provided by machines or entered by human operators.

As depicted in Figure 134, a data marketplace 13008 may include data streams 13010, a data marketplace input interface, data marketplace inputs 13056, a data payment allocation engine 13038, marketplace value rating engine 13040, a data brokering engine 13042, a marketplace self-organization engine 13076 and one or more data pools 13070. The data marketplace 13008 may be included within the cloud networking environment 30 or externally connected to the cloud networking environment 13068. Data pools 13070 may also be included within the cloud networking environment 13068 or may be externally connected to the cloud networking environment 13068.

The data marketplace 13008 may connect to data pools 13070 directly, for example if the data marketplace 13008 and data pools 13070 are located in the same physical location. The data marketplace 13008 may connect to data pools 13070 via a cloud networking environment 30, for example if the data marketplace 13008 and data pools 13070 are located in different physical locations.

The data marketplace 13008 may connect to and receive inputs. The data marketplace 13008 may receive marketplace inputs through data interfaces, for example one or more data collectors 13020. The data collectors 13020 may be multiplexing data collectors. Inputs received through the data collectors 13020 may be received as one or more than one data streams 13010 from one or more than one data collectors 13020 and integrated into additional data streams 13010 by the multiplexer (MUX) 13022.

The data streams 13010 may also include data from the data pools 60. Data marketplace inputs, data streams 13010 and data pools 13070 may include metrics and measures of success of the data marketplace 13008. The metrics and measures of success of the data marketplace 13008 may then be used by the machine learning capability 13014 to configure one or more parameters of the data marketplace 13008.

Inputs may be consortia inputs 13054. Consortia inputs 13054 may be received from consortia. Consortia may include energy consortia, healthcare consortia, manufacturing consortia, smart city consortia, transportation consortia and the like. Consortia may be pre-existing consortia or new consortia.

In an exemplary and non-limiting embodiment, new consortia may be formed as a result of the data marketplace 13008 making available particular data types and data combinations. The data brokering engine 13042 may allow consortia members to trade information. The data brokering engine 13042 may allow consortia members to trade information based on information value, as calculated by the marketplace value rating engine 13040, for example.

The data marketplace 13008 may also connect to self-organization 13012, machine learning 13014 and rights management 13016 capabilities. Rights management capabilities 13016 may include rights.

Rights may include business strategy and solution rights, liaison rights 13058, marketing rights 13078, security rights 13060, technology rights 13062, testbed rights 13064 and the like. Business strategy and solution lifecycle rights may include business strategy and planning rights, industrial internet system design rights, project management rights, solution evaluation and contractual aspects rights. Liaison rights 13058 may include standards organization rights, open-source community rights, certification and testing body rights and governmental organization rights. Marketing rights 13078 may include communication rights, energy rights, healthcare rights, marketing-security rights, retail operation rights, smart factory rights and thought leadership rights. Security rights 13060 may include driving rights that drive industry consensus, promote security best practices and accelerate the adoption of security best practices.

Technology rights 13062 may include architecture rights, connectivity rights, distributed data management and interoperability rights, industrial analytics rights, innovation rights, IT/OT rights, safety rights, vocabulary rights, use case rights and liaison rights 13058. Testbed rights 13064 may include rights to implement of specific use cases and scenarios, as well as rights to produce testable outcomes to confirm that an implementation conforms to expected results, for example. Testbed rights 13064 may also include rights to explore untested or existing technologies working together, for example interoperability testing, generate new and potentially disruptive products and services and generate requirements and priorities for standards organizations, consortia and other stakeholder groups.

The rights management capability may assign different rights to different participants in the data marketplace 13008. In an exemplary and non-limiting embodiment, manufacturers or remote maintenance organizations (RMOs). Participants may be assigned rights to information based on their equipment or proprietary methods. The data marketplace 13008 may then ensure that only the appropriate data streams 13010 are made available to the market, based on the assigned rights.

The rights management capability 13016 may manage permissions to access the data in the marketplace 13008. One or more parameters of the rights management capability 13016 may be automatically configured by the machine learning capability 13014 and may be based on a metric of success of the data marketplace 13008. The machine learning engine 13014 may also use the metric and measure of success to configure a user interface. The user interface may present a data element of the user of the data marketplace 13008. The user interface may also present one or more mechanisms by which a user of the data marketplace 13008 may obtain access to one or more of the data elements.

The data payment allocation engine 13038 may allocate data marketplace payments. The data payment allocation engine 13038 may allocate data marketplace payments according to the value of a data stream 13010, the value of a contribution to a data stream 13010 and the like. This type of payment allocation may allow the data marketplace 13008 to allocate payments to data contributors, based on the value of the data contributions.

For example, contributors of data to a higher-value data stream 13010 may receive higher payments than contributors of data to lower-value data streams 13010. Similarly, data marketplace participants, for example IoT device manufacturers and system integrators, may be rated or ranked by the value of the data or the power of the configurations they provide and support.

The data marketplace 13008 may be a self-organizing data marketplace. A self-organizing data marketplace may self-organize using self-organization capabilities 13012. Self-organization capabilities 13012 may be learned, developed and optimized using artificial intelligence (AI) capabilities. AI capabilities may be provided by the machine learning 13014 capability, for example. Self-organization may occur via an expert system and may be based on the application of a model, one or more rules, or the like. Self-organization may occur via a neural network or deep learning system, such as by optimizing variations of the organization of the data pool over time based on feedback to one or more measures of success. Self-organization may occur by a hybrid or combination of a rule-based system, model-based system, and neural network or other AI system. Various capabilities may be self-organized, such as how data elements are presented in the user interface of the marketplace, what data elements are presented, what data streams are obtained as inputs to the marketplace, how data elements are described, what metadata is provided with data elements, how data elements are stored (such as in a cache or other "hot" storage or in slower, but less expensive storage locations), where data elements are stored (such as in edge elements of a network), how data elements are combined, fused or multiplexed, or the like. Feedback to self-organization may include various metrics and measures of success, such as profit measures, yield measures, ratings (such as by users, purchasers, licensees, reviewers, and the like), indicators of interest (such as clickstream activity, time spent on a page, time spent reviewing elements and links to data elements), and others as described throughout this disclosure.

Data marketplace inputs 13056, data streams 13010 and data pools 13070 may be organized, based on metrics and measures of success of the data marketplace 13056. Data marketplace inputs 13056, data streams 13010 and data pools 13070 may be organized by the self-organization capability 13012, allowing the marketplace inputs 13056, data streams 13010, and data pools 60to be organized automatically, without requiring interaction by a user of the data marketplace. 13008.

The metric and measure of success may also be used to configure the data brokering engine 13042 to execute a transaction among at least two marketplace participants. The machine learning engine 13014 may use the metric of success to configure the data brokering engine 13042 automatically, without requiring user intervention. The metric of success may also be used by a pricing engine, for example the marketplace value rating engine 13040, to set the price of one or more data elements within the data marketplace 13008.

In an exemplary and non-limiting embodiment, the self-organizing data marketplace may self-organize to determine which type of data streams 13010 are the most valuable and offer the most valuable and other data streams 13010 for sale. The calculation of data stream value may be performed by the marketplace value rating engine 13040.

In embodiments, a policy automation system for a data collection system in an industrial environment may comprise: a policy input interface structured to receive policy inputs relating to definition of at least one parameter of at least one of a rule, a policy and a protocol, wherein the at least one parameter defines at least one of a configuration for a data collection device, an access policy for accessing data from the data collection device, and collection policy for collection of data by the device; and a policy automation engine for taking the inputs and automatically configuring and deploying at least one of the rule, the policy and the protocol within the system for data collection. In embodiments, the at least one parameter may define at least one of an energy utilization policy, a cost-based policy, a data writing policy, and a data storage policy. The parameter may relate to a policy selected from among compliance, fault, configuration, accounting, provisioning and security policies for defining how devices are created, deployed and managed. The compliance policies may include data ownership policies. The data ownership policies may specify who owns data. The data ownership policies may specify how owners may use data. The compliance policies may include data analysis policies. The data analysis policies may specify what data holders may access, how data holders may use data, and how data may be combined with other data by data holders. The compliance policies may include data use policies, data format policies, and the like. The data format policies may include standard data format policies, mandated data format policies. The compliance policies may include data transmission policies. The data transmission policies may include inter-jurisdictional transmission data transmission policies. The compliance policies may include data security policies, data privacy policies, information sharing policies, and the like. The data security policies may include at rest data security policies, transmitted data security policies, and the like. The information sharing policies may include policies specifying when information may be sold, when information may be shared, and the like. The compliance policies may include jurisdictional policies. The jurisdictional policies may include policies specifying who controls data. The jurisdictional policies may include policies specifying when data may be controlled. The jurisdictional policies may include policies specifying how data transmitted across boundaries is controlled.

In embodiments, a policy automation system for a data collection system in an industrial environment may comprise: a policy automation engine for enabling configuration of a plurality of policies applicable to collection and utilization of data handled by a plurality of network connected devices deployed in a plurality of industrial environments, wherein the policy automation engine is hosted on information technology infrastructure elements that are located separately from the industrial environment, wherein upon configuration of a policy in the policy automation engine, the policy is automatically deployed across a plurality of devices in the plurality of industrial environments, wherein the policy sets configuration parameters relating to what data is collected by the data collection system and relating to access permissions for the collected data. The policies may include a plurality of policies selected among compliance, fault, configuration, accounting, provisioning and security policies for defining how devices are created, deployed and managed, and the plurality of policies communicatively coupled to policies. A policy input interface may be structured to receive policy inputs used as an input to at least one of a rule, policy and protocol definition, such as where the policy automation system a centralized source of policies for creating, deploying and managing policies for devices within an industrial environment.

In embodiments, a policy automation system for a data collection system in an industrial environment may comprise: a policy automation engine for enabling configuration of a plurality of policies applicable to collection and utilization of data handled by a plurality of network connected devices deployed in a plurality of industrial environments, wherein the policy automation engine is hosted on information technology infrastructure elements that are located separately from the industrial environment, wherein upon configuration of a policy in the policy automation engine, the policy is automatically deployed across a plurality of devices in the plurality of industrial environments, wherein the policy sets configuration parameters relating to what data is collected by the data collection system and relating to access permissions for the collected data, wherein the policy automation system is communicatively coupled to a plurality of devices through a cloud network connection. The cloud network connection may be a privately-owned cloud connection, a publicly provided cloud connection, a publicly provided cloud connection, the primary connection between the policy automation system and device, the primary connection between the policy automation system and device, an intranet cloud connection, connecting devices within a single enterprise, an extranet cloud connection, connecting devices among multiple enterprises, a secure cloud network connection, secured by a virtual private network (VPN) connection, and the like.

In embodiments, a data marketplace for a data collection system in an industrial environment may comprise: an input interface structured to receive marketplace inputs; at least one of a data pool and a data stream to provide collected data within the marketplace; and data streams that include data from data pools. In embodiments, at least one parameter of the marketplace may be automatically configured by a machine learning facility based on a metric of success of the marketplace. The inputs may include a plurality of data streams from a plurality of industrial data collectors. The data collectors may be multiplexing data collectors. The inputs may include consortia inputs. A consortium may be an existing consortium, a new consortium, a new consortium related to a data stream through a common interest, and the like. The metrics and measures of success may include profit measures, yield measures, ratings, indicators of interest, and the like. The ratings may include user ratings, purchaser ratings, licensee ratings, reviewer ratings, and the like. The indicators of interest may include clickstream activity, time spent on a page, time spent reviewing elements, links to data elements, and the like.

In embodiments, a data marketplace for a data collection system in an industrial environment may comprise: an input system structured to receive a plurality of data inputs relating to data sensed from or about one or more industrial machines; at least one of a data pool and a data stream to provide collected data within the marketplace; and a self-organization system for organizing at least one of the data inputs and the data pools based on a metric of success of the marketplace. In embodiments, the self-organization system may optimize variations of the organization of the data pool over time. The optimized variations may be based on feedback to one or more measures of success. The self-organization system may organize how data elements are presented in the user interface of the marketplace. The self-organization system may select what data elements are presented, what data streams are obtained as inputs to the marketplace, how data elements are described, what metadata is provided with data elements, a storage method for data elements, a location within a communication network for the storage elements (such as in edge elements of a network), a data element combination method, and the like. A storage method may include a cache or other "hot" storage method. A storage method may include slower, but less expensive storage locations. The data element combination method may be a data fusion method, a data multiplexing method, and the like. The self-organization system may receive feedback data, such as where feedback data includes success metrics and measures. Success metrics and measures may include profit measures, include yield measures, ratings, indicators of interest, and the like. Ratings include ratings may be provided by users, purchasers, by licensees, reviewers. Success metrics and measures may include indicators of interest. Indicators of interest may include clickstream activity, time spent on a page activity, time spent reviewing elements, time spent reviewing elements, links to data elements, and the like. The self-organization system may determine the value of data streams. The value of data streams may determine which data streams are offered for sale by the data marketplace. The ratings may include user ratings. The ratings may include purchaser ratings, licensee ratings, reviewer ratings, and the like.

In embodiments, a data marketplace for a data collection system in an industrial environment may comprise: an input interface structured to receive data inputs from or about one or more of a plurality of industrial machines; at least one of a data pool and a data stream to provide collected data within the marketplace; and a rights management engine for managing permissions to access the data in the marketplace. In embodiments, at least one parameter of the rights management engine may be automatically configured by a machine learning facility based on a metric of success of the marketplace. The rights management engine may assign rights to participants of the data marketplace. The rights may include business strategy and solution rights, liaison rights, marketing rights, security rights, technology rights, testbed rights, and the like. The metrics and measures of success may include profit measures, yield measures, ratings, and the like. The ratings may include user ratings, purchaser ratings, include licensee ratings, reviewer ratings, and the like. The metrics and measures success may include indicators of interest, such as where interest includes clickstream activity, time spent on a page, time spent reviewing elements, and links to data elements.

In embodiments, a data marketplace for a data collection system in an industrial environment may comprise: an input interface structured to receive data inputs from or about one or more of a plurality of industrial machines; at least one of a data pool and a data stream to provide collected data within the marketplace; and a data brokering engine configured to execute a data transaction among at least two marketplace participants. In embodiments, at least one parameter of the data brokering engine may be automatically configured by a machine learning facility based on a metric of success of the marketplace. A data transaction input may include a marketplace value rating. A marketplace value rating may be assigned to a marketplace participant. A marketplace value rating may be assigned to a marketplace participant is assigned based on the value of input provided by the participant to the marketplace. A data transaction may be a trade transaction, a sale transaction, is a payment transaction, and the like. The metrics and measures of success may include profit measures, yield measures, ratings, and the like. The ratings may include user ratings. The ratings may include purchaser ratings, licensee ratings, reviewer ratings, and the like. The metrics and measures success may include indicators of interest. The indicators of interest may include clickstream activity, time spent on a page, include time spent reviewing elements, links to data elements, and the like.

In embodiments, a data marketplace for a data collection system in an industrial environment may comprise: an input interface structured to receive data inputs from or about one or more of a plurality of industrial machines; at least one of a data pool and a data stream to provide collected data within the marketplace; and a pricing engine for setting a price for at least one data element within the marketplace. In embodiments, pricing may be automatically configured for the pricing engine by a machine learning facility based on a metric of success of the marketplace. The metrics and measures of success may include profit measures, yield measures, include ratings, and the like. The ratings may include user ratings. The ratings may include purchaser ratings, licensee ratings, reviewer ratings, and the like. The metrics and measures success may include indicators of interest. The indicators of interest may include clickstream activity, time spent on a page, include time spent reviewing elements, links to data elements, and the like.

In embodiments, a data marketplace for a data collection system in an industrial environment may comprise: an input interface structured to receive data inputs from or about one or more of a plurality of industrial machines; at least one of a data pool and a data stream to provide collected data within the marketplace; and a user interface for presenting a data element and at least one mechanism by which a party using the marketplace can obtain access to the at least one data stream or data pool. In embodiments, pricing may be automatically configured for the pricing engine by a machine learning facility based on a metric of success of the marketplace. The metrics and measures of success may include profit measures, yield measures, include ratings, and the like. The ratings may include user ratings. The ratings may include purchaser ratings, licensee ratings, reviewer ratings, and the like. The metrics and measures success may include indicators of interest. The indicators of interest may include clickstream activity, time spent on a page, include time spent reviewing elements, links to data elements, and the like.

In embodiments, a data collection system in an industrial environment may comprise: a policy automation system for a data collection system in an industrial environment, comprising: a plurality of rules selected among roles, permissions and uses, the plurality of rules communicatively coupled to policies, protocols, and policy inputs; a plurality of policies selected among compliance, fault, configuration, accounting, provisioning, and security policies for defining how devices are created, deployed and managed, the plurality of policies communicatively coupled to policies, protocols and policy inputs and a policy input interface structured to receive policy inputs used as an input to at least one of a rule, policy and protocol definition.

In embodiments, a data marketplace may comprise: an input interface structured to receive marketplace inputs; a plurality of data pools to store collected data, including marketplace inputs and make collected data available for use by the marketplace; and data streams that include data from data pools.

As described herein and in Appendix B attached hereto, intelligent industrial equipment and systems may be configured in various networks, including self-forming networks, private networks, Internet-based networks, and the like. One or more of the smart heating systems as described in Appendix B that may incorporate hydrogen production, storage, and use may be configured as nodes in such a network. In embodiments, a smart heating system may be configured with one or more network ports, such as a wireless network port that facilitate connection through Wi-Fi and other wired and/or wireless communication protocols as described. The smart heating system includes a smart hydrogen production system and a smart hydrogen storage system, and the like described in Appendix B and may be configured individually or as an integral system connected as one or more nodes in a network of industrial equipment and systems. By way of this example, a smart heating system may be disposed in an on-site industrial equipment operations center, such as a portable trailer equipped with communication capabilities and the like. Such deployed smart heating system may be configured, manually, automatically, or semi-automatically to join a network of devices, such as industrial data collection, control, and monitoring nodes and participate in network management, communication, data collection, data monitoring, control, and the like.

In another example of a smart heating system participating in a network of industrial equipment monitoring, control, and data collection devices in that a plurality of the smart heating systems may be configured into a smart heating system sub-network. In embodiments, data generated by the sub-network of devices may be communicated over the network of industrial equipment using the methods and systems described herein.

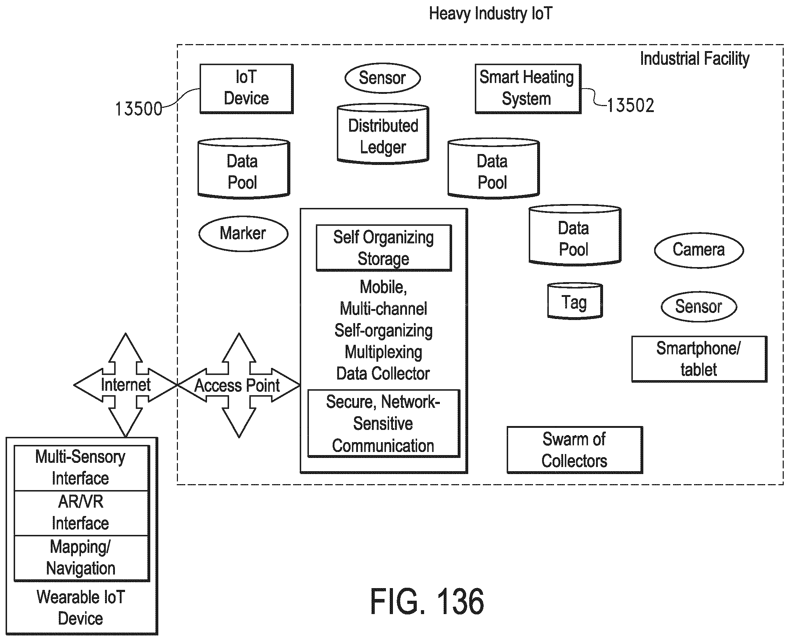

In embodiments, the smart heating system may participate in a network of industrial equipment as described herein. By way of this example, one or more of the smart heating systems, as depicted in Figure 136, may be configured as an IoT device, such as IoT device 13500 and the like described herein. In embodiments, the smart heating system 13502 may communicate through an access point, over a mobile ad hoc network or mechanism for connectivity described herein for devices and systems elements and/or through network elements described herein.

In embodiments, one or more smart heating systems described in Appendix B may incorporate, integrate, use, or connect with facilities, platforms, modules, and the like that may enable the smart heating system to perform functions such as analytics, self-organizing storage, data collection and the like that may improve data collection, deploy increased intelligence, and the like. Various data analysis techniques, such as machine pattern recognition of data, collection, generation, storage, and communication of fusion data from analog industrial sensors, multi-sensor data collection and multiplexing, self-organizing data pools, self-organizing swarm of industrial data collectors, and others described herein may be embodied in, enabled by, used in combination with, and derived from data collected by one or more of the smart heating systems.

In embodiments, a smart heating system may be configured with local data collection capabilities for obtaining long blocks of data (i.e., long duration of data acquisition), such as from a plurality of sensors, at a single relatively high-sampling rate as opposed to multiple sets of data taken at different sampling rates. By way of this example, the local data collection capabilities may include planning data acquisition routes based on historical templates and the like. In embodiments, the local data collection capabilities may include managing data collection bands, such as bands that define a specific frequency band and at least one of a group of spectral peaks, true-peak level, crest factor and the like.

In embodiments, one or more smart heating systems may participate as a self-organizing swarm of IoT devices that may facilitate industrial data collection. The smart heating systems may organize with other smart heating systems, IoT devices, industrial data collectors, and the like to organize among themselves to optimize data collection based on the capabilities and conditions of the smart heating system and needs to sense, record, and acquire information from and around the smart heating systems. In embodiments, one or more smart heating systems may be configured with processing intelligence and capabilities that may facilitate coordinating with other members, devices, or the like of the swarm. In embodiments, a smart heating system member of the swarm may track information about what other smart heating systems in a swarm are handling and collecting to facilitate allocating data collection activities, data storage, data processing and data publishing among the swarm members.

In embodiments, a plurality of smart heating systems may be configured with distinct burners but may share a common hydrogen production system and/or a common hydrogen storage system. In embodiments, the plurality of smart heating systems may coordinate data collection associated with the common hydrogen production and/or storage systems so that data collection is not unnecessarily duplicated by multiple smart heating systems. In embodiments, a smart heating system that may be consuming hydrogen may perform the hydrogen production and/or storage data collection so that as smart heating system may prepare to consume hydrogen, they coordinate with other smart heating systems to ensure that their consumption is tracked, even if another smart heating system performs the data collection, handling, and the like. In embodiments, smart heating systems in a swarm may communicate among each other to determine which smart heating system will perform hydrogen consumption data collection and processing when each smart heating system prepares to stop consumption of hydrogen, such as when heating, cooking, or other use of the heat is nearing completion and the like. By way of this example when a plurality of smart heating systems is actively consuming hydrogen, data collection may be performed by a first smart heating system, data analytics may be performed by a second smart heating system, and data and data analytics recording or reporting may be performed by a third smart heating system. By allocating certain data collection, processing, storage, and reporting functions to different smart heating systems, certain smart heating systems with sufficient storage, processing bandwidth, communication bandwidth, available energy supply and the like may be allocated an appropriate role. When a smart heating system is nearing an end of its heating time, cooking time, or the like, it may signal to the swarm that it will be going into power conservation mode soon and, therefore, it may not be allocated to perform data analysis or the like that would need to be interrupted by the power conservation mode.

In embodiments, another benefit of using a swarm of smart heating systems as disclosed herein is that data storage capabilities of the swarm may be utilized to store more information than could be stored on a single smart heating system by sharing the role of storing data for the swarm.

In embodiments, the self-organizing swarm of smart heating systems includes one of the systems being designated as a master swarm participant that may facilitate decision making regarding the allocation of resources of the individual smart heating systems in the swarm for data collection, processing, storage, reporting and the like activities.

In embodiments, the methods and systems of self-organizing swarm of industrial data collectors may include a plurality of additional functions, capabilities, features, operating modes, and the like described herein. In embodiments, a smart heating system may be configured to perform any or all of these additional features, capabilities, functions, and the like without limitation.

The methods and systems described herein may be deployed in part or in whole through a machine that executes computer software, program codes, and/or instructions on a processor. The present disclosure may be implemented as a method on the machine, as a system or apparatus as part of or in relation to the machine, or as a computer program product embodied in a computer readable medium executing on one or more of the machines. In embodiments, the processor may be part of a server, cloud server, client, network infrastructure, mobile computing platform, stationary computing platform, or other computing platform. A processor may be any kind of computational or processing device capable of executing program instructions, codes, binary instructions, and the like. The processor may be or may include a signal processor, digital processor, embedded processor, microprocessor, or any variant such as a co-processor (math co-processor, graphic co-processor, communication co-processor, and the like) and the like that may directly or indirectly facilitate execution of program code or program instructions stored thereon. In addition, the processor may enable execution of multiple programs, threads, and codes. The threads may be executed simultaneously to enhance the performance of the processor and to facilitate simultaneous operations of the application. By way of implementation, methods, program codes, program instructions, and the like described herein may be implemented in one or more thread. The thread may spawn other threads that may have assigned priorities associated with them; the processor may execute these threads based on priority or any other order based on instructions provided in the program code. The processor, or any machine utilizing one, may include non-transitory memory that stores methods, codes, instructions, and programs as described herein and elsewhere. The processor may access a non-transitory storage medium through an interface that may store methods, codes, and instructions as described herein and elsewhere. The storage medium associated with the processor for storing methods, programs, codes, program instructions, or other type of instructions capable of being executed by the computing or processing device may include but may not be limited to one or more of a CD-ROM, DVD, memory, hard disk, flash drive, RAM, ROM, cache, and the like.

A processor may include one or more cores that may enhance speed and performance of a multiprocessor. In embodiments, the process may be a dual core processor, quad core processors, other chip-level multiprocessor and the like that combine two or more independent cores (called a die).

The methods and systems described herein may be deployed in part or in whole through a machine that executes computer software on a server, client, firewall, gateway, hub, router, or other such computer and/or networking hardware. The software program may be associated with a server that may include a file server, print server, domain server, internet server, intranet server, cloud server, and other variants such as secondary server, host server, distributed server, and the like. The server may include one or more of memories, processors, computer readable transitory and/or non-transitory media, storage media, ports (physical and virtual), communication devices, and interfaces capable of accessing other servers, clients, machines, and devices through a wired or a wireless medium, and the like. The methods, programs, or codes as described herein and elsewhere may be executed by the server. In addition, other devices required for execution of methods as described in this application may be considered as a part of the infrastructure associated with the server.

The server may provide an interface to other devices including, without limitation, clients, other servers, printers, database servers, print servers, file servers, communication servers, distributed servers, social networks, and the like. Additionally, this coupling and/or connection may facilitate remote execution of program across the network. The networking of some or all of these devices may facilitate parallel processing of a program or method at one or more locations without deviating from the scope of the disclosure. In addition, any of the devices attached to the server through an interface may include at least one storage medium capable of storing methods, programs, code, and/or instructions. A central repository may provide program instructions to be executed on different devices. In this implementation, the remote repository may act as a storage medium for program code, instructions, and programs.

The software program may be associated with a client that may include a file client, print client, domain client, internet client, intranet client, and other variants such as secondary client, host client, distributed client, and the like. The client may include one or more of memories, processors, computer readable transitory and/or non-transitory media, storage media, ports (physical and virtual), communication devices, and interfaces capable of accessing other clients, servers, machines, and devices through a wired or a wireless medium, and the like. The methods, programs, or codes as described herein and elsewhere may be executed by the client. In addition, other devices required for execution of methods as described in this application may be considered as a part of the infrastructure associated with the client.

The client may provide an interface to other devices including, without limitation, servers, other clients, printers, database servers, print servers, file servers, communication servers, distributed servers, and the like. Additionally, this coupling and/or connection may facilitate remote execution of a program across the network. The networking of some or all of these devices may facilitate parallel processing of a program or method at one or more location without deviating from the scope of the disclosure. In addition, any of the devices attached to the client through an interface may include at least one storage medium capable of storing methods, programs, applications, code, and/or instructions. A central repository may provide program instructions to be executed on different devices. In this implementation, the remote repository may act as a storage medium for program code, instructions, and programs.

Fig. 286 provides a schematic view of an architecture, its components and functional relationships for an industrial Internet of Things solution. A data handling platform 13700 may include a set of data handling layers, such as those described in various embodiments throughout this disclosure and the documents incorporated by referenced herein, such as intelligent storage systems and capabilities 13724, monitoring and collection systems and capabilities 13728, and processing and intelligence capabilities 13730, which may serve a set of applications 13732, such as where various capabilities, microservices, and the like of the platform 13700 may service multiple applications 13732 in a unified or integrated way. The platform 13700 may be deployed in a cloud computing environment, such as on cloud computing infrastructure and services, and may, such as through the monitoring and collection systems and capabilities 13728, connect to an industrial environment 13704, where an edge system 13718 may provide connectivity (such as using any of the network and/or software systems, services, protocols, or capabilities described throughout this disclosure and the documents incorporated by reference herein, or as would be understood by one skilled in the art, such as cellular connectivity (including 5G capabilities), Wifi, Bluetooth and other network protocols, and application programming interfaces, ports, connectors, brokers, and other software systems, among many others), computation (such as processing of data, signal processing, data transformation, data normalization, or the like) and intelligence (such as applying decision rules or models, computing and operating on inputs to produce analytics, alerts, reports and/or control instructions, applying one or more artificial intelligence systems (such as machine learning systems, neural networks, expert systems, deep learning systems, or other systems disclosed throughout this disclosure or in the document incorporated by reference here).

In embodiments, the platform 13700 may generate, host, integrate, link to, include, integrate, or otherwise interact with a set of industrial entity digital twins 13734, which may comprise digital representations or replicas of real world states of a set of industrial entities 13736, such as workers 13712, fixed assets 13712 (such as machines, systems, devices, fixtures, and the like), infrastructure 13710 (such as floors, walls, ceilings, loading docks, foundations, and many others), and moving assets 13708 (such as vehicles, forklifts, autonomous vehicles, drones, assembly lines, fans, rotors, turbines, pumps, valves, fluids, and many others), among many others that reside in or about an industrial environment 13704.

In embodiments, the edge system 13718 may interface with each of a mobile data collector 13702 (such as having any of the capabilities described throughout this disclosure and the documents incorporated by reference herein, such as having onboard intelligence (such as for optimizing data storage and processing, power utilization, or selection of a set of sensor inputs among various available inputs, such as having a cross-point switch or similar facility for selecting and routing a subset of sensor channels, such as having an RFID reader or other reader for taking asset tag and similar data from entities 13736, or such as having capabilities to connect to and read from sensors 13722 and/or onboard diagnostic systems, buses, and other systems that are integrated with or into the entities 13736, among many others) and a simultaneous location and mapping (SLAM) system 13714 (such as for precisely determining locations of entities 13736 within a space and mapping those entities to the locations, such as by representing the entities 13736 in a point cloud that represents the results of scanning the environment 13704 or part thereof with LIDAR, ultrasound, sonar, X-ray, magnetic resonance imaging, infrared, deep infrared, or other scanning technology that is capable of providing a representation of the entities 13736 within the environment 13704. In one illustrative embodiment, a scan represents the entities 13736 as a point cloud of data points collected by a LIDAR-based SLAM system 13714. In embodiments, the mobile data collector 13702 and the SLAM system 13714 are integrated or linked, so that locations, positions, orientations, or the like, of the points of collection of data by the mobile data collector 13702 are automatically registered with or by the SLAM system 114, such that a unified data set is provided to the edge system 13718 for further communication, computation, or processing. For example, a set of vibration data readings made by a 3-axis mobile data collector 13702 may be registered to particular locations of a mapped point cloud of data created by or in the SLAM system 13714, so that vibration information can be linked to those parts of the point cloud and subsequently linked to a machine or other entity 13730 represented by that part of the point cloud or other mapping systems.

In embodiments, the SLAM system 13714 and the mobile data collector 13702 are integrated into a single portable device, allowing a data collection route to be performed (such as by a worker, drone, or autonomous vehicle) as the space is mapped by the SLAM system 13714. This may thus comprise a simultaneous location, mapping and data collection system (SLAMDC) 13740. In embodiments, the mobile data collector 13702 may collect from sensors 13722 that are included in or integrated with the data collector 13702 (such as onboard triaxial vibration sensors, ultrasound sensors, acoustic sensors, heat sensors, or many others, including any of the types of sensors disclosed herein or in the documents incorporated herein by reference). In embodiments, the mobile data collector 13702 may collect from sensors 13722 that are disposed in or around the environment 13704, such as cameras, analog sensors, digital sensors, or many others. In embodiments, a data collector, such as a worker, drone, or autonomous vehicle, may be instructed, such as by onboard intelligence, intelligence of the edge system 13718, or an intelligent system 13730 of the platform 13700, to place additional sensors in, on, or in proximity to a set of industrial entities 13736, such as where intelligence indicates a benefit to additional gathering of information, such as where a problem is detected or predicted.

In embodiments, the edge system 13718 may include, link or connect to, integrate with, or be integrated into a control system 13742, such as for providing control for one or more industrial entities 13736, such as controlling a machine in a factory (such as a CNC machine, additive manufacturing machine, energy system (e.g., a generator or turbine), an assembly line, or the like), controlling a workflow (such as a production workflow, an inspection workflow, a data collection workflow, a maintenance workflow, a servicing workflow, or the like), or controlling sub-systems, systems, or operations of an entire factory or set of factories. Processing, computation and intelligence capabilities of the edge system 13718 (and by virtue of connectivity between the edge system 13718 and the platform 13700, processing, computation and intelligence capabilities 13730 of the platform 13700) may thus benefit from input from a set of control systems 13742 and may provide inputs to (including control signals for) the set of control systems 13742. Data from the mobile data collector 13702 (including from sensors 13722, onboard information of the entities 13736, and other information), from the edge system 13718, from the SLAM system 13714, from a combined SLAMDC system 13740, from one or more applications 13732, or from the platform 13700 (including any of the layers there), may be represented in a set of industrial digital twins 13734. For example, an industrial digital twin 13734 may show a point cloud view of a mapped industrial environment (which, in embodiments, may be augmented, such as using 3D mapping, AR or VR systems) with relevant data collection elements presented in the point cloud view along with the point cloud. Many examples are available, such as highlighting (such as by color or motion) in the digital twin 13734, areas of the point cloud where systems are vibrating in a way that is out of the normal range (such as where severity units, as discussed elsewhere herein, exceed a threshold). Industrial entity digital twins 13734 may include, link or connect to, or integrate with a variety of interfaces and dashboards 13738, such as ones configured for specific workflows, roles, and users. For example, dashboards and interfaces may be configured for workers who will interact with specific machines (such as where the digital twin is used for training, workflow guidance, diagnosis of problems, and the like); for managers of operations on a factory floor (such as where a digital twin 13734 displays a layout of machines on the floor, patterns of traffic (e.g., moving assets. 13708 and workers 13712) involved in workflows, status information for workers, machines, processes, or the like (including operational status, maintenance status, inspection status, and the like), analytic information (such as indicating metrics about operations, about potential problems, or the like); for inspectors (such as where the digital twin 13734 represents areas that are indicated by data collectors 13702 to require or benefit from additional inspection (e.g., where the inspector can check off items that have already been inspected or highlight items for further inspection by interacting with them in a digital twin interface or dashboard 13738); for maintenance and service workers (such as where a digital twin 13734 highlights locations of items requiring maintenance in a schematic view and guides the service workers to the right location and/or machine, then presents (such as in a different view) information and guidance on how to undertake the service or maintenance, ranging from a checklist or workflow to a virtual, mixed or augmented reality training or guidance session that can be presented at the machine); for front office managers (such as finance professionals who can be presented financial information, such as ROI metrics, output metrics, cost metrics, and the like (including current status and predictions), legal personnel (such as where a digital twin 13734 may present compliance information, highlight legal risks (such as safety violations or instances where status information about operations indicates a likelihood that the company may breach a contract (such as by failing to produce an output that is required by a contract) and the like), inventory managers, procurement personnel, and the like; and for executives, such as CEOs, CTOs, COOs, CIOs, CDOs, CMOs, and the like, who may interact with digital twins 13734 that represent whole factories, or sets of factories, such as to identify risks and opportunities that may involve understanding interactions of elements and/or contributions of elements involving industrial entities 13736 to overall operations of an enterprise, to its strategies, or the like.

In various embodiments, the interfaces and dashboards 13738 may display sensor information collected from sensors 13722, from mobile data collectors 13702, from SLAM systems 13714 (or combined SLAMDC systems 13740); mapping information from a SLAM system 13714 or SLAMDC system 13740; representations of shapes and placements of entities 13736 (such as point clouds, CAD drawings, photographs, 3D representations, blueprints, or abstract representations (such as topologies or hierarchies showing relationships); representations of calculations, metrics, computations, statistics, analytics and the like (such as computed by the edge system 13718, processing and intelligence system 13730, or other system); state or status information (such as indicating operational states or status of workflows involving industrial entities 13736), or the like.

Information elements from the industrial environment 13704 or about industrial entities 13736 can be presented in overlays (e.g., where metrics or symbols are presented on top of a point cloud, a photo, or a 3D representation of a unit in a 3D interface), in native form (such as where a point cloud is represented), in 3D visualizations (such as where the interface handles elements as 3D geometric elements), and the like.

Interfaces and dashboards 13738 may include graphical interfaces (such as for laptops, tablets and mobile devices), touch screen interfaces, voice-activated interfaces, augmented reality interfaces, virtual reality interfaces, mixed reality interfaces, application programming interfaces (APIs), and the like.

Digital twins 13734 may be of various types, such as component digital twins represent an individual part of component; machine digital twins that represent an entire machine; system digital twins that represent a system involving multiple components, parts, machines or the like and their interactions; worker digital twins that represent one or more attributes or states of a set of workers 13712; arrangement digital twins that represent the layout or arrangement of entities 13736 (such as, without limitation, the arrangement of components, assets, machines, workers, or other elements on a factory floor); augmented, virtual and/or mixed reality digital twins that provide a realistic experience for a user, such as simulating or mimicking interaction with an asset, another worker, a workflow, or the like (such as for training a worker or group of workers how to operate or undertake maintenance on a machine or system, how to undertake a workflow involving a machine or system, or the like); abstract digital twins (such as ones that represent elements and relationships, such as in topologies, hierarchies, flow diagrams, or the like), and others.

In embodiments, interfaces and dashboards 13738 may be provided that facilitate drilling down and/or zooming up in a digital twin 13734 (whether under user control or by automation, such as based on an understanding of status information, contextual information, user interactions, or other factors), such as to obtain a more detailed view of a component of a larger view (e.g., to see a specific part of a machine in an exploded view); to move up to a wider view that encompasses more components and/or their interactions; to obtain additional information (such as to see additional metrics related to a metric represented in a digital twin 13734, more granular data, source data that was used to determine a metric, or the like); and the like.

In embodiments, interfaces and dashboard 13738 may be configured to facilitate switching between views or types of digital twin of the same entities 13736 (whether under user control or by automation, such as based on an understanding of status information, contextual information, user interactions, or other factors involving the digital twin 13734). For example, a user may switch from an overall schematic view that represents current status information for the machines and workflows on a factory floor to a 3D view that shows a realistic representation of one of the machines (such as one that has been highlighted as having an issue, such as where a data collector 13702 has determined that it is operating outside normal parameters for temperature, vibration, pressure, or the like).

In various embodiments an end-to-end system is provided, where an industrial digital twin 13734 maintains an ongoing or periodically updated data connection, via one or more layers of the platform 100, through connectivity to an edge system, to a mobile data collector 13702, SLAM system 13714 and/or SLAMDC system 13740, such that the industrial digital twin 13734 provides real-time, or periodically updated, information about the current attributes, states, status, or the like of the entities 13736 in an industrial environment 13704. This may include, as noted above, representing sensor data from sensors 13722, onboard data from entities 13736, control information from control systems 13742, various data collected by data collectors 13702, mapping information, information computed by edge intelligence of an edge system 13718 and/or processing and intelligence system 13730, and the like, such that a manager, executive, or other users can have highly interactive visualization of and interaction with the elements under the user's authority, or otherwise of interest to the user.

In embodiments, analytics derived from data collection by a mobile data collector 13702 and/or from sensors 13722, control systems 13742 and/or onboard sensing or diagnostics of industrial entities 13736 may be computed by the edge system 13718 and/or the processing and intelligence system 13730 may include a metric that indicates, based on current information from these various data sources, and optionally based on historical data from outcomes involving similar entities 13736, the probability of an unscheduled shutdown during a period of time. The unscheduled shutdown metric may be calculated for various entities 13736, such as for a machine, a system, a workflow, a factory, or a set of factories, and it may be represented in an industrial digital twin 13734, such as by representing the metric as an overlay element on a digital twin that provides a schematic of a factory floor.

In embodiments, contributing component factors to the probability of an unscheduled shutdown of an industrial entity 13736, a workflow, or an operation and the like may be analyzed and represented in an interface or dashboard 13738 of an industrial digital twin 13734. These component factors may include the probability of occurrence of known failure modes of components or machines (such as calculated by predictive maintenance models, such as ones that use physical models, historical models, historical models, or the like), such as failures based on mechanical stress, overloading, wear and tear, problems with bearings, problems with couplings, out-of-balance states of rotating components, overheating, freezing, excess viscosity, lubrication problems, clogging, cavitation, vacuum failures, leaks, low fluid levels, low pressure levels, electrical failures, power failures, failures of component supply, absence of tools, absence of component parts, broken parts, shutdowns of other entities 13736, traffic congestion, information technology problems, computation errors, cyberattacks, and many others.

In embodiments, unscheduled shutdown probability may be determined by a prediction machine, such as a neural network, such as one that is trained on a historical data set of failures. In embodiments, unscheduled shutdown probability for an entity may be determined by a combination of a model-based approach and a neural network, such as where a neural network determines a probability of a specific type of failure and/or of a specific part of a system, and that probability is used in a model to compute a probability of shutdown of a system in which that type of failure or specific part is involved, or vice versa.

In embodiments, unscheduled shutdown probabilities may be computed at the edge system 13718, by the processing and intelligence capabilities 13730 of the platform 100, or by a combination of those or other intelligence systems. Unscheduled shutdown probability metrics may be represented in a set of industrial digital twins 13734, such as providing managers, maintenance workers, executives, inspectors, and others a visual indication of the overall risk of an unscheduled shutdown, as well as visual indicators of the component elements or entities 13736 that are at risk, or that are contributing to increases in the probability of an unscheduled shutdown of a factory, plant, system, process, line, machine, workflow, or the like. This may allow managers and executives to drill down, obtain further information, and undertake actions that reduce the risk. As one illustrative example, an executive may be presented with a view of a set of factories, with one factory being represented in an industrial digital twin 13734 in a different color (such as bright red) based on that factory having a probability of unscheduled shutdown that exceeds a threshold (or simply that it has the highest probability among a set of factories). This may direct the attention of the executive to that factory, thereby leading to further insight into operational choices that would have been missed if the executive were merely presented with raw data, a spreadsheet, or the like where the unscheduled shutdown probability would need to be calculated, inferred, or the like. Similarly, a factory manager for the highlighted factory may have an industrial digital twin 13734 that presents the probabilities of unscheduled shutdown of various component machines and processes; for example, a pump that is maintaining a vacuum of a critical semiconductor production process for the factory (or a biologics production process, or the like) may be identified as having a high risk of failure, such as based on vibration analysis that indicates cavitation, in combination with other data sources, such as ones indicating the age of the pump and its maintenance and operating history. The pump may be highlighted in the industrial digital twin 13734, such as in a view configured for the factory manager, such as by highlighted the pump in a bright color and by animating the pump with movement (such as shaking a visual element) that indicates a vibration problem is the likely contributor to the risk of unscheduled shutdown of the pump (which cascades to a failure of the vacuum, the failure of the critical production process, and the shutdown of the entire factory). As a result of attention being directed by the digital twin by visual cues (as compared to a spreadsheet or raw data output), the factory manager may direct (including by interacting with the pump in the digital twin, such as by touching it) attention to the pump for maintenance or replacement. An instruction or message provided by one user (such as the factory manager or executive) may result in a message, or highlighting, in a different digital twin 13734 or user interface or dashboard 13738 that is configured for another user. For example, the pump, if flagged by the factory manager in a view of the factory, may appear in a service worker's digital twin 13734, such as showing a route to the pump and subsequently switching to a view that guides the worker through inspection, maintenance, service, and/or replacement. Thus, a set of digital twins 13734 may highlight unscheduled shutdown risks based on real-time or periodic connection through edge intelligence to data collection systems and facilitate workflows (enabled within the digital twins) by which attention is directed for various workers (by highlighting visual elements) to issues that they can address, optionally with guidance and instruction from additional views of the set of digital twins.

In embodiments, the end-to-end real time or periodic connection between a set of industrial digital twins 13734 through the platform 13700, the edge system 13718, control systems 13742, data collectors 13702, SLAM systems 13714, SLAMDC systems 13740 and sensors 13722 to industrial entities 13736 and their various onboard sensors, data collection systems, diagnostic systems, buses, and the like may facilitate control over the various elements of these systems via manipulation of elements in interfaces and dashboards 13738 of the digital twins 13734, including ones that are linked to, included in, or integrated with one or more applications 13732, such as via APIs. For example, manipulating an element of an industrial digital twin 13734 may be used to configure or modify data collection by a mobile data collector 13702, such as by causing the mobile data collector 13702 to switch channels (such as where multiple sensor channels are available, and (such as via a cross-point switch) the data collector 13702 is instructed to switch from, for example, collecting a single axis vibration channel, temperature and pressure to collecting three-axis vibration data. This may occur for example, if a manager sees a potential vibration problem in a digital twin 13734 of a machine and touches the element for a drill down, which may automatically, or under user control, switch the data collection mode to provide different sensor data, more granular data (such as by collecting data at much shorter time intervals or in a streaming format, or the like). As another example, manipulating a user interface element or dashboard element 13738 or providing an instruction via an API to a digital twin 13734 may configure or modify configuration of intelligence or computation capabilities, such as of an edge system 13718, a processing and intelligence system 13730 of the platform 13700, or other intelligence system; for example, a user (or the system, under automated control), may reconfigure the edge system to access different data sources, such as by pruning data sources that appear to have little influence or adding new data sources that may improve outcomes, such as ones involving classification activities, prediction activities, and or control activities. For example, a predictive maintenance system (or multiple such systems) may exist for a factory. When the factory is scanned to produce a point cloud that represents various physical entities in the environment, such as during a data collection and mapping route of a SLAMDC system 13740, and the factory appears on the industrial digital twin 13734 of a user, the user may be presented with a set of additional data sources available for that factory, including the predictive maintenance data, and the user may select the data source and link it (such as by dragging and dropping it) to a part of the digital twin (e.g., where a point cloud represents a machine at a given location), resulting in the predictive maintenance data being fed as a data source to any intelligence systems that operate on that machine. Whether to facilitate augmenting intelligence systems as in this example, or for other purposes, the platform 13700 may facilitate connection of the end-to-end industrial digital twin system 13734 (and the elements that exchange information with it and/or are controlled by it) with other information technology systems of an enterprise, such as by linking to, providing inputs to, taking puts from, and/or integrating with those other systems, which may include, without limitation, enterprise resource planning systems, control systems, predictive maintenance systems, inventory management systems, procurement systems, inspection systems, compliance systems, quality control systems, operations planning systems, and many others.

In embodiments, manipulating a user interface element or dashboard element 13738 or providing an instruction via an API to a digital twin 13734 may configure or modify configuration of a control system 13742 or provide a control signal to a control system 13736, such that the digital twin provides a direct control interface to one or more industrial entities 13736.

In embodiments, an industrial digital twin 13734 and related end-to-end system of data collection and intelligence may be used in connection with support of a service ecosystem, such as one where maintenance and service activities of the types disclosed throughout this disclosure and the documents incorporated by reference are supported, such as where an understanding of maintenance and service needs, in particular where intelligence indicates an elevated probability of unscheduled shutdown of an important entity 13736, is represented in a set of industrial digital twins 13734 configured for use by the users and applications (including ones that provide robotic process automation) involved in a service ecosystem, such as ones involved in identifying risks, flagging service issues, identifying and ordering necessary parts, tools, or components, identifying capable workers with necessary expertise, scheduling workers, parts, components and the like, scheduling necessary shutdowns of dependent processes and operations, routing workers and assets to service locations (outside and within the floor of a factory or plant), guiding workers (including automated workers) through procedures and protocols, prompting data collection and reporting, and many others. This support includes providing real-time and/or periodic updating from data collection, providing visualization of elements, with zooming, drilling down, switching views and the like (automatically and/or under user control), allowing interactions to obtain or configure intelligence and/or control, and other capabilities noted throughout this disclosure and in the documents incorporated herein by reference.

FIG. 287 is a schematic illustrating an industrial setting 28720 at which a sensor kit 28700 has been installed. In embodiments, the sensor kit 28700 may refer to a fully deployable, purpose-configured industrial IoT system that is provided in a unified kit and is ready for deployment in the industrial setting 28720 by a consumer entity (e.g., owner or operator of an industrial setting 28720). In embodiments, the sensor kit 28700 allows the owner or operator to install and deploy the sensor kit with no or minimal configuration (e.g., setting user permissions, setting passwords, and/or setting notification and/or display preferences). The term "sensor kit" 28700 may refer to a set of devices that are installed in an industrial setting 28720 (e.g., a factory, a mine, an oil field, an oil pipeline, a refinery, a commercial kitchen, an industrial complex, a storage facility, a building site, and the like). The collection of devices comprising the sensor kit 28700 includes a set of one or more internet of things (IoT) sensors 28702 and a set of one or more edge devices 28704. For purposes of discussion, references to "sensors" or "sensor devices" should be understood to mean IoT sensors, unless specifically stated otherwise.

In embodiments, the sensor kit 28700 includes a set of IoT sensors 28702 that are configured for deployment in, on, or around an industrial component, a type of an industrial component (e.g., a turbine, a generator, a fan, a pump, a valve, an assembly line, a pipe or pipeline, a food inspection line, a server rack, and the like), an industrial setting 28720, and/or a type of industrial setting 28720 (e.g., indoor, outdoor, manufacturing, mining, drilling, resource extraction, underground, underwater, and the like) and a set of edge devices capable of handling inputs from the sensors and providing network-based communications. In embodiments, an edge device 28704 may include or may communicate with a local data processing system (e.g., a device configured to compress sensor data, filter sensor data, analyze sensor data, issue notifications based on sensor data and the like) capable of providing local outputs, such as of signals and of analytic results that result from local processing. In embodiments, the edge device 28704 may include or may communicate with a communication system (e.g., a Wi-Fi chipset, a cellular chipset, a satellite transceiver, cognitive radio, one or more Bluetooth chips and/or other networking device) that is capable of communicating data (e.g., raw and/or processed sensor data, notifications, command instructions, etc.) within and outside the industrial environment. In embodiments, the communication system is configured to operate without reliance on the main data or communication networks of an industrial setting 28720. In embodiments, the communication system is provided with security capabilities and instructions that maintain complete physical and data separation from the main data or communication networks of an industrial setting 28720. For example, in embodiments, Bluetooth-enabled edge devices may be configured to permit pairing only with pre-registered components of a kit, rather than with other Bluetooth-enabled devices in an industrial setting 28720.

In embodiments, an IoT sensor 28702 is a sensor device that is configured to collect sensor data and to communicate sensor data to another device using at least one communication protocol. In embodiments, IoT sensors 28702 are configured for deployment in, on, or around a defined type of an industrial entity. The term industrial entity may refer to any object that may be monitored in an industrial setting 28720. In embodiments, industrial entities may include industrial components (e.g., a turbine, a generator, a fan, a pump, a valve, an assembly line, a pipe or pipe line, a food inspection line, a server rack, and the like). In embodiments, industrial entities may include organisms that are associated with an industrial setting 28720 (e.g., humans working in the industrial setting 28720 or livestock being monitored in the industrial setting 28720). Depending on the intended use, setting, or purpose of the sensor kit 28700, the configuration and form factor of an IoT sensor 28702 will vary. Examples of different types of sensors include: vibration sensors, inertial sensors, temperature sensors, humidity sensors, motion sensors, LIDAR sensors, smoke/fire sensors, current sensors, pressure sensors, pH sensors, light sensors, radiation sensors, and the like.

In embodiments, an edge device 28704 may be a computing device configured to receive sensor data from the one or more IoT sensors 28702 and perform one or more edge-related processes relating to the sensor data. An edge-related process may refer to a process that is performed at an edge device 28704 in order to store the sensor data, reduce bandwidth on a communication network, and/or reduce the computational resources required at a backend system. Examples of edge processes can include data filtering, signal filtering, data processing, compression, encoding, quick-predictions, quick-notifications, emergency alarming, and the like.

In embodiments, a sensor kit 28700 is pre-configured such that the devices (e.g., sensors 28702, edge devices 28704, collection devices, gateways, etc.) within the sensor kit 28700 are configured to communicate with one another via a sensor kit network without a user having to configure the sensor kit network. A sensor kit network may refer to a closed communication network that is established between the various devices of the sensor kit and that utilizes two or more different communication protocols and/or communication mediums to enable communication of data between the devices and to a broader communication network, such as a public communication network 28790 (e.g., the Internet, a satellite network, and/or one or more cellular networks). For example, while some devices in a sensor kit network may communicate using a Bluetooth communication protocol, other devices may communicate with one another using a near-field communication protocol, a Zigbee protocol, and/or a Wi-Fi communication protocol. In some implementations, a sensor kit 28700 may be configured to establish a mesh network having various devices acting as routing nodes within the sensor kit network. For example, sensors 28702 may be configured to collect data and transmit the collected data to the edge device 28704 via the sensor kit network, but may also be configured to receive and route data packets from other sensors 28702 within the sensor kit network towards an edge device 28704.

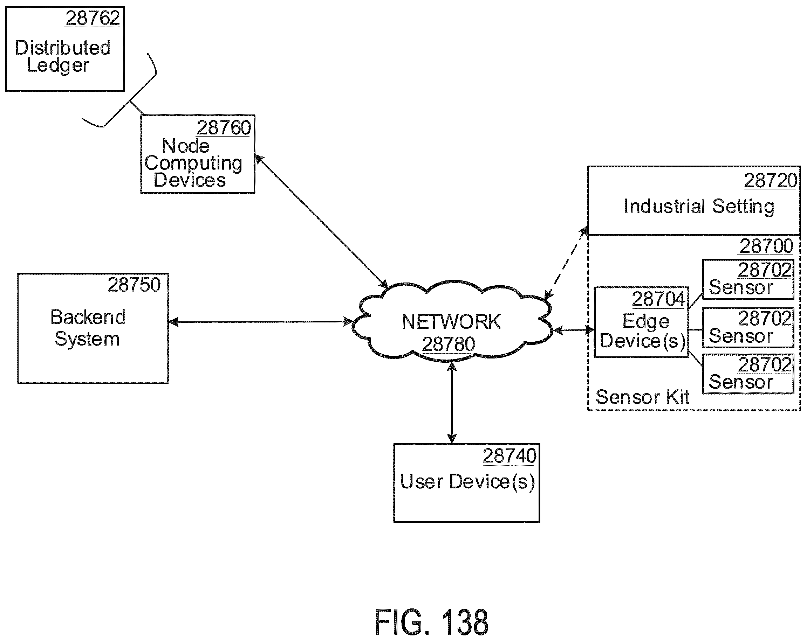

In embodiments, a sensor kit network may include additional types of devices. In embodiments, a sensor kit 28700 may include one or more collection devices (not shown in FIG. 138) that act as routing nodes in the sensor network, such that the collection devices may be part of a mesh network. In embodiments, a sensor kit 28700 may include a gateway device (not shown in FIG. 138) that enable communication with a broader network, whereby the gateway device may communicate with the edge device 28704 over a wired or wireless communication medium in industrial settings 28720 that would prevent an edge device 28704 from communicating with the public communication network 28790 (e.g., in a factory having very thick concrete walls). Embodiments of the sensor kit 28700 may include additional devices without departing from the scope of the disclosure.

In embodiments, the sensor kit 28700 is configured to communicate with a backend system 28750 via a communication network, such as the public communication network 28790. In embodiments, the backend system 28750 is configured to receive sensor data from a sensor kit 28700 and to perform one or more backend operations on the received sensor data. Examples of backend operations may include storing the sensor data in a database, performing analytics tasks on the sensor data, providing the results of the analytics and/or visualizations of the sensor data to a user via a portal and/or a dashboard, training one or more machine-learned models using the sensor data, determining predictions and/or classifications relating to the operation of the industrial setting 28720 and/or industrial devices of the industrial setting 28720 based on the sensor data, controlling an aspect and/or an industrial device of the industrial setting 28720 based on the predictions and/or classifications, issuing notifications to the user via the portal and/or the dashboard based on the predictions and/or classifications, and the like.

It is appreciated that in some embodiments, the sensor kit 28700 may provide additional types of data to the backend system 28750. For example, the sensor kit 28700 may provide diagnostic data indicating any detected issues (e.g., malfunction, battery levels low, etc.) or potential issues with the sensors 28702 or other devices in the sensor kit 28700.

In embodiments, the sensor kit 28700 is configured to self-monitor for failing components (e.g., failing sensors 28702) and to report failing components to the operator. For example, in some embodiments, the edge device 28704 may be configured to detect failure of a sensor 28702 based on a lack of reporting from a sensor, a lack of response to requests (e.g., "pings"), and/or based on unreliable data (e.g., data regularly falling out of the expected sensor readings). In some embodiments, the edge device 28704 can maintain a sensor kit network map indicating where each device in the sensor kit network is located and can provide approximate locations and/or identifiers of failed sensors to a user.

In embodiments, the sensor kit 28700 may be implemented to allow post-installation configuration. A post-installation configuration may refer to an update to the sensor kit 28700 by adding devices and/or services to the sensor kit 28700 after the sensor kit 28700 has been installed. In some of these embodiments, users (e.g., operators of the industrial setting 28720) of the system may subscribe to or purchase certain edge "services." For example, the sensor kit 28700 may be configured to execute certain programs installed on one or more devices of the sensor kit 28700 only if the user has a valid subscription or ownership permission to access the edge service supported by the program. When the user no longer has the valid subscription and/or ownership permission, the sensor kit 28700 may preclude execution of those programs. For example, a user may subscribe to unlock AI-based edge services, mesh networking capabilities, self-monitoring services, compression services, in-facility notifications, and the like.

In some embodiments, users can add new sensors 28702 to the sensor kit post-installation in a plug-and-play-like manner. In some of these embodiments, the edge device 28704 and the sensors 28702 (or other devices to be added to the sensor kit 28700) may include respective short-range communication capabilities (e.g., near-field communication (NFC) chips, RFID chips, Bluetooth chips, Wi-Fi adapters, and the like). In these embodiments, the sensors 28702 may include persistent storage that stores identifying data (e.g., a sensor identifier value) and any other data that would be used to add the sensor 28702 to the sensor kit 28700 (e.g., an industrial device type, supported communication protocols, and the like). In some embodiments, a user may initiate a post-installation addition to the sensor kit 28700 by pressing a button on the edge device 28704, and/or by bringing the sensor 28702 into the vicinity of the edge device 28704. In some embodiments, in response to a user initiating a post-installation addition to the sensor kit, the edge device 28704 may emit a signal (e.g., a radio frequency). The edge device 28704 may emit the signal, for example, as a result of a human user pushing a button or at a predetermined time interval. The emitted signal may trigger a sensor 28702 proximate enough to receive the signal and to transmit the sensor ID of the sensor 28702 and any other suitable configuration data (e.g., device type, communication protocols, and the like). In response to the sensor 28702 transmitting its configuration data (e.g., sensor ID and other relevant configuration data) to the edge device 28704, the edge device 28704 may add the sensor 28702 to the sensor kit 28702. Adding the sensor 28702 to the sensor kit 28704 may include updating a data store or manifest stored at the edge device 28704 that identifies the devices of the sensor kit 28700 and data relating thereto. Non-limiting examples of data that may be stored in the manifest relating to each respective sensor 28702 may include the communication protocol used by the sensor 28702 to communicate with the edge device 28704 (or intermediate devices), the type of sensor data provided by the sensor 28702 (e.g., vibration sensor data, temperature data, humidity data, etc.), models used to analyze sensor data from the sensor 28702 (e.g., a model identifier), alarm limits associated with the sensor 28702, and the like.

In embodiments, the sensor kit 28700 (e.g., the edge device 28704) may be configured to update a distributed ledger 28762 with sensor data captured by the sensor kit 28700. In embodiments, a distributed ledger 28762 is a Blockchain or any other suitable distributed ledger 28762. The distributed ledger 28762 may be a public ledger or a private ledger. Private ledgers reduce power consumption requirements of maintaining the distributed ledger 28762, while public ledgers consume more power but offer more robust security. In embodiments, the distributed ledger 28762 may be distributed amongst a plurality of node computing devices 28760. The node computing devices 28760 may be any suitable computing device, including physical servers, virtual servers, personal computing devices, and the like. In some embodiments, the node computing devices 28760 are approved (e.g., via a consensus mechanism) before the node computing devices 28760 may participate in the distributed ledger. In some embodiments, the distributed ledger 28762 may be privately stored. For example, a distributed ledger may be stored amongst a set of preapproved node computing devices, such that the distributed ledger 28762 is not accessible by non-approved devices. In some embodiments, the node computing devices 28760 are edge devices 28704 of the sensor kit 28702 and other sensor kits 28702.

In embodiments, the distributed ledger 28762 is comprised of a set of linked data structures (e.g., blocks, data records, etc.), such that the linked data structures form an acyclic graph. For purposes of explanation, the data structures will be referred to as blocks. In embodiments, each block may include a header that includes a unique ID of the block and a body that includes the data that is stored in the block, and a pointer. In embodiments, the pointer is the block ID of a parent block of the block, wherein the parent block is a block that was created prior to the block being written. The data stored in a respective block can be sensor data captured by a respective sensor kit 28700. Depending on the implementation, the types of sensor data and the amount of sensor data stored in a respective body of a block may vary. For example, a block may store a set of sensor measurements from one or more types of sensors 28702 of the sensor kit 28700 captured over a period of time (e.g., sensor data 28702 captured from all of the sensors 28702 in the sensor kit 28700 over a period one hour or one day) and metadata relating thereto (e.g., sensor identifiers of each sensor measurement and a timestamp of each sensor measurement or group of sensor measurements). In some embodiments, a block may store sensor measurements determined to be anomalous (e.g., outside a standard deviation of expected sensor measurements or deltas in sensor measurements that are above a threshold) and/or sensor measurements indicative of an issue or potential issue, and related metadata (e.g., sensor IDs of each sensor measurement and a timestamp of each sensor measurement or group of sensor measurements). In some embodiments, the sensor data stored in a block may be compressed and/or encoded sensor data, such that the edge device 28704 compresses/encodes the sensor data into a more compact format. In embodiments, the edge device 28704 may generate a hash of the body, such that the contents of the body (e.g., block ID of the parent block and the sensor data) are hashed and cannot be altered without changing the value of the hash. In embodiments, the edge device 28704 may encrypt the content within the block, so that the content may not be read by unauthorized devices.

As mentioned, the distributed ledger 28762 may be used for different purposes. In some embodiments, the distributed ledger 28762 may further include one or more smart contracts. A smart contract is a self-executing digital contract. A smart contract may include code (e.g., executable instructions) that defines one or more conditions that trigger one or more actions. A smart contract may be written by a developer in a scripting language (e.g., JavaScript), an object code language (e.g., Java), or a compiled language (e.g., C++ or C). Once written, a smart contract may be encoded in a block and deployed to the distributed ledger 28762. In embodiments, the backend system 28750 is configured to receive the smart contract from a user and write the smart contract to a respective distributed ledger 28762. In embodiments, an address of the smart contract (e.g., the block ID of the block containing the smart contract) may be provided to one or more parties to the smart contract, such that respective parties may invoke the smart contract using the address. In some embodiments, the smart contract may include an API that allows a party to provide data (e.g., addresses of blocks) and/or to transmit data (e.g., instructions to transfer funds to an account).

In example implementations, an insurer may allow insured owners and/or operators of an industrial setting 28720 to agree to share sensor data with the insurer to demonstrate that the equipment in the facility is functioning properly and, in return, the insurer may issue a rebate or refund to the owners and/or operators if the owners and/or operators are compliant with an agreement with the insurers. Compliance with the agreement may be verified electronically by participant nodes in the distributed ledger and/or the sensor kit 28700 via a smart contract. In embodiments, the insurer may deploy the smart contract (e.g., by adding the smart contract to a distributed ledger 28762) that triggers the issuance of rebates or refunds on portions of insurance premiums when the sensor kit 28700 provides sufficient sensor data to the insurer via the distributed ledger that indicates the facility is operating without issue. In some of these embodiments, the smart contract may include a first condition that requires a certain amount of sensor data to be reported by a facility and a second condition that each instance of the sensor data equals a value (e.g., there are no classified or predicted issues) or range of values (e.g., all sensor measurements are within a predefined range of values). In some embodiments, the action taken in response to one or more of the conditions being met may be to deposit funds (e.g., a wire transfer or cryptocurrency) into an account. In this example, the edge device 28704 may write blocks containing sensor data to the distributed ledger. The edge device 28704 may also provide the addresses of these blocks to the smart contract (e.g., using an API of the smart contract). Upon the smart contract verifying the first and second conditions of the contract, the smart contract may initiate the transfer of funds from an account of the insurer to the account of the insured.

In another example, a regulatory body (e.g., a state, local, or federal regulatory agency) may require facility operators to report sensor data to ensure compliance with one or more regulations. For instance, the regulatory body may regulate food inspection facilities, pharmaceutical manufacturing facilities, e.g., manufacturing facility 1700, indoor agricultural facilities, e.g., indoor agricultural facility 1800, offshore oil extraction facilities, e.g., underwater industrial facility 1900, or the like. In embodiments, the regulatory body may deploy a smart contract that is configured to receive and verify the sensor data from an industrial setting 28720, and in response to verifying the sensor data issues a compliance token (or certificate) to an account of the facility owner. In some of these embodiments, the smart contract may include a condition that requires a certain amount of sensor data to be reported by a facility and a second condition that requires the sensor data to be compliant with the reporting regulations. In this example, the edge device 28704 may write blocks containing sensor data to the distributed ledger 28762. The edge device 28704 may also provide the addresses of these blocks to the smart contract (e.g., using an API of the smart contract). Upon the smart contract verifying the first and second conditions of the contract, the smart contract may generate a token indicating compliance by the facility operator and may initiate the transfer of funds to an account (e.g., a digital wallet) associated with the facility.

A distributed ledger 28762 may be adapted for additional or alternative applications without departing from the scope of the disclosure.

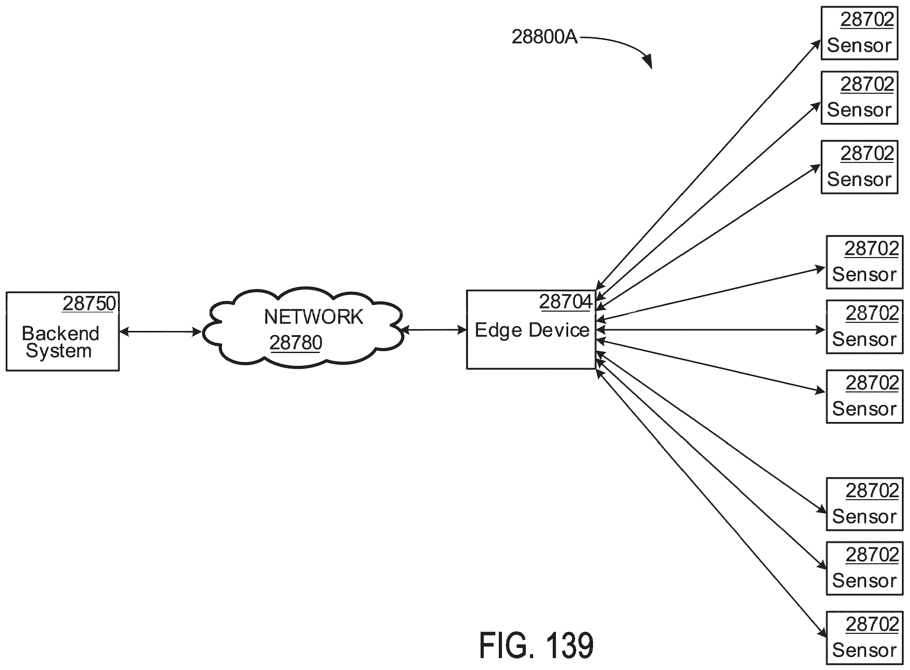

FIGS. 139, 140, and 141 illustrate example configurations of a sensor kit network 28800. Depending on the sensor kit 28700 and the industrial setting 28720 that the sensor kit 28700 is installed in, the sensor kit network 28800 may communicate in different manners.

FIG. 139 illustrates an example sensor kit network 28800A that is a star network. In these embodiments, the sensors 28702 communicate directly with the edge device 28704. In these embodiments, the communication protocol(s) utilized by the sensor devices 28702 and the edge device 28704 to communicate are based on one or more of the physical area of the sensor kit network 28702, the power sources available, and the types of sensors 28702 in the sensor kit 28700. For example, in settings where the area being monitored is a relatively small area and where the sensors 28702 are not able to connect to a power supply, the sensors 28702 may be fabricated with a Bluetooth Low Energy (BLE) microchip that communicates using a Bluetooth Low Energy protocol (e.g., the Bluetooth 5 protocol maintained by the Bluetooth Special Interest Group). In another example, in a relatively small area where lots of sensors 28702 are to be deployed, the sensors 28702 may be fabricated with the Wi-Fi microchip that communicates using the IEEE 802.11 protocol. In the embodiments of FIG. 139, the sensors 28702 may be configured to perform one-way or two-way communication. In embodiments where the edge device 28704 does not need to communicate data and/or instructions to the sensors 28702, the sensors 28702 may be configured for one-way communication. In embodiments where the edge device 28704 does communicate data and/or instructions to the sensors 28702, the sensors 28702 may be configured with transceivers that perform two-way communication. A star network may be configured with devices having other suitable communication devices without departing from the scope of the disclosure.

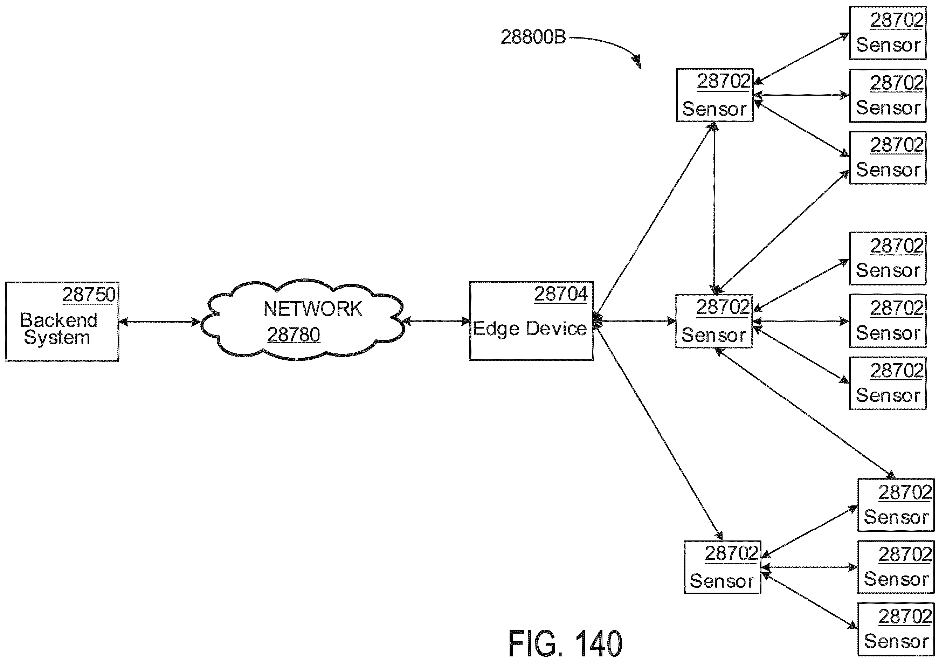

FIG. 140 illustrates an example sensor kit network 28800B that is a mesh network where the nodes (e.g., sensors 28702) connect to each other directly, dynamically, and/or non-hierarchically to cooperate with one another to efficiently route data to and from the edge device 28704. In some embodiments, the devices in the mesh network (e.g., the sensors 28702, the edge device 28704, and/or any other devices in the sensor kit network 28800B) may be configured to self-organize and self-configure the mesh network, such that the sensors 28702 and/or the edge device 28704 may determine which devices route data on behalf of other devices, and/or redundancies for transmission should a routing node (e.g., sensor 28702) fail. In embodiments, the sensor kit 28700 may be configured to implement a mesh network in industrial settings 28720 where the area being monitored is relatively large (e.g., greater than 28700 meters in radius from the edge device 28704) and/or where the sensors 28702 in the sensor kit 28700 are intended to be installed in close proximity to one another. In the latter scenario, the power consumption of each individual sensor 28702 may be reduced in comparison to sensors 28702 in a star network, as the distance that each respective sensor 28702 needs to transmit over is relatively less than the distance that the respective sensor 28702 would need to transmit over in a star network. In embodiments, a sensor 28702 may be fabricated with a Zigbee® microchips, a Digi XBee® microchip, a Bluetooth Low Energy microchip, and/or any other suitable communication devices configured to participate in a mesh network.

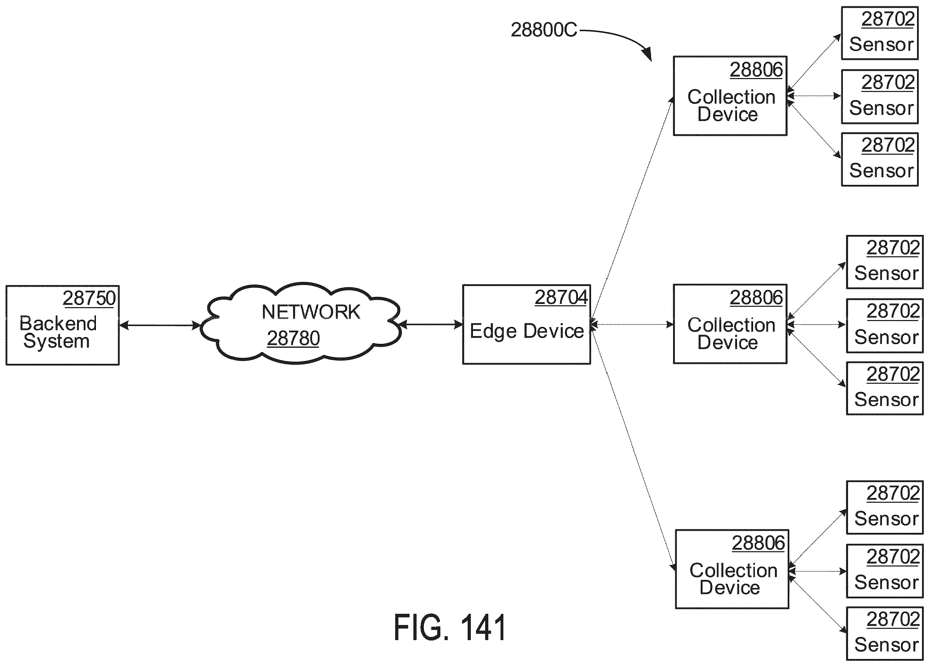

FIG. 141 illustrates an example of a sensor kit network 28800C that is a hierarchical network. In these embodiments, the sensor kit 28700 includes a set of collection devices 28806. A collection device 28806 may refer to a non-sensor device that receives sensor data from a sensor device 28704 and routes the sensor data to an edge device 28704, either directly or via another collection device 28806. In embodiments, a hierarchical network may refer to a network topography where one or more intermediate devices (e.g., collection devices 28806) route data from one or more respective peripheral devices (e.g., sensor devices 28702) to a central device (e.g., edge device 28704). A hierarchical network may include wired and/or wireless connections. In embodiments, a sensor device 28702 may be configured to communicate with a collection device 28806 via any suitable communication device (e.g., Bluetooth Low Energy microchips, Wi-Fi microchips, Zigbee microchips, or the like). In embodiments, hierarchical sensor kit networks may be implemented in industrial settings 28720 where power sources are available to power the collection devices 28806 and/or where the sensors 28702 are likely to be spaced too far apart to support a reliable mesh network.

The examples of FIGS. 139-141 are provided for examples of different topologies of a sensor kit network. These examples are not intended to limit the types of sensor kit networks 28800 that may be formed by a sensor kit 28700. Furthermore, sensor kit networks 28800 may be configured as hybrids of star networks, hierarchical networks, and/or mesh networks, depending on the industrial settings 28720 in which respective sensor kits 28800 are being deployed.

FIG. 289A illustrates an example IoT sensor 28702 (or sensor) according to embodiments of the present disclosure. Embodiments of the IoT sensor 28702 may include, but are not limited to, one or more sensing components 28902, one or more storage devices 28904, one or more power supplies 28906, one or more communication devices 28908, and a processing device 28910. In embodiments, the processing device 28910 may execute an edge reporting module 28912.

A sensor 28702 includes at least one sensing component 28902. A sensing component 28902 may be any digital, analog, chemical, and/or mechanical component that outputs raw sensor data to the processing device 28910. It is appreciated that different types of sensors 28702 are fabricated with different types of sensing components. In embodiments, sensing components 28902 of an inertial sensor may include one or more accelerometers and/or one or more gyroscopes. In embodiments, sensing components 28902 of a temperature sensor may include one or more thermistors or other temperature sensing mechanisms. In embodiments, sensing components 28902 of a heat flux sensor may include, for example, thin film sensors, surface mount sensors, polymer-based sensors, chemical sensors and others. In embodiments, sensing components 28902 of a motion sensor may include a LIDAR device, a radar device, a sonar device, or the like. In embodiments, sensing components 28902 of an occupancy sensor may include a surface being monitored for occupancy, a pressure activated switch embedded under the surface of the occupancy sensor and/or a piezoelectric element integrated into the surface of the occupancy sensor, such that an electrical signal is generated when an object occupies the surface being monitored for occupancy. In embodiments, sensing components 28902 of a humidity sensor may include a capacitive element (e.g., a metal oxide between to electrodes) that outputs an electrical capacity value corresponding to the ambient humidity; a resistive element that includes a salt medium having electrodes on two sides of the medium, whereby the variable resistance measured at the electrodes corresponds to the ambient humidity; and/or a thermal element that includes a first thermal sensor that outputs a temperature of a dry medium (e.g., dry nitrogen) and a second thermal sensor that outputs an ambient temperature of the sensor's environment, such that the humidity is determined based on the change, i.e., the delta, between the temperature in the dry medium and the ambient temperature. In embodiments, sensing components 28902 of a vibration sensor may include accelerometer components, position sensing components, torque sensing components, and others. It is appreciated that the list of sensor types and sensing components thereof is provided for example. Additional or alternative types of sensors and sensing components may be integrated into a sensor 28702 without departing from the scope of the disclosure. Furthermore, in some embodiments, the sensors 28702 of a sensor kit 28700 may include audio, visual, or audio/visual sensors, in addition to non-audio/-visual sensors 28702 (i.e., sensors that do not capture video or audio). In these embodiments, the sensing components 28992 may include a camera and/or one or more microphones. In some embodiments, the microphones may be directional microphones, such that a direction of a source of audio may be determined.

A storage device 28904 may be any suitable medium for storing data that is to be transmitted to the edge device 28704. In embodiments, a storage device 28904 may be a persistent storage medium, such as a flash memory device. In embodiments, a storage device 28904 may be a transitory storage medium, such as a random access memory device. In embodiments, a storage device 28904 may be a circuit configured to store charges, whereby the magnitude of the charge stored by the component is indicative of a sensed value, or incremental counts. In these embodiments, this type of storage device 28904 may be used where power availability and size are concerns, and/or where the sensor data is count-based (e.g., a number of detection events). It is appreciated that any other suitable storage devices 28904 may be used. In embodiments, the storage device 28904 may include a cache 28914, such that the cache 28914 stores sensor data that is not yet reported to the edge device 28704. In these embodiments, the edge reporting module 28912 may clear the cache 28914 after the sensor data being stored in the cache 28914 is transmitted to the edge device 28704.

A power supply 28906 is any suitable component that provides power to the other components of the sensor 28702, including the sensing components 28902, storage devices 28904, communication devices 28906, and/or the processing device 28908. In embodiments, a power supply 28906 includes a wired connection to an external power supply (e.g., alternating current delivered from a power outlet, or direct current delivered from a battery or solar power supply). In embodiments, the power supply 28906 may include a power inverter that converts alternating currents to direct currents (or vice-versa). In embodiments, a power supply 28906 may include an integrated power source, such as a rechargeable lithium ion battery or a solar element. In embodiments, a power supply 28906 may include a self-powering element, such as a piezoelectric element. In these embodiments, the piezoelectric element may output a voltage upon a sufficient mechanical stress or force being applied to the element. This voltage may be stored in a capacitor and/or may power a sensing element 28902. In embodiments, the power supply may include an antenna (e.g., a receiver or transceiver) that receives a radio frequency that energizes the sensor 28702. In these embodiments, the radio frequency may cause the sensor 28702 to "wake up" and may trigger an action by the sensor 28702, such as taking sensor measurements and/or reporting sensor data to the edge device 28704. A power supply 28906 may include additional or alternative components as well.

In embodiments, a communication device 28908 is a device that enables wired or wireless communication with another device in the sensor kit network 28800. In most sensor kit configurations 28700, the sensors 28702 are configured to communicate wirelessly. In these embodiments, a communication device 28908 may include a transmitter or transceiver that transmits data to other devices in the sensor kit network 28800. Furthermore, in some of these embodiments, communication devices 28908 having transceivers may receive data from other devices in the sensor kit network 200. In wireless embodiments, the transceiver may be integrated into a chip that is configured to perform communication using a respective communication protocol. In some embodiments, a communication device 28908 may be a Zigbee® microchip, a Digi XBee® microchip, a Bluetooth microchip, a Bluetooth Low Energy microchip, a Wi-Fi microchip, or any other suitable short-range communication microchip. In embodiments where the sensor kit 200 supports a mesh network, the communication device 28908 may be a microchip that implements a communication protocol that supports mesh networking (e.g., ZigBee PRO mesh networking protocol, Bluetooth Mesh, 802.11a/b/g/n/ac, and the like). In these embodiments, a communication device 28908 may be configured to establish the mesh network and handle the routing of data packets received from other devices in accordance with the communication protocol implemented by the communication device 28908. In some embodiments, a sensor 28702 may be configured with two or more communication devices 28908. In these embodiments, the sensors 28702 may be added to different sensor kit 28700 configurations and/or may allow for flexible configuration of the sensor kit 28702 depending on the industrial setting 28720.

In embodiments, the processing device 28910 may be a microprocessor. The microprocessor may include memory (e.g., read-only memory (ROM)) that stores computer-executable instructions and one or more processors that execute the computer-executable instructions. In embodiments, the processing device 28910 executes an edge reporting module 28912. In embodiments, the edge reporting module 28912 is configured to transmit data to the edge device 28704. Depending on the configuration of the sensor kit network 28800 and location of the sensors 28702 with respect to the edge device 28704, the edge reporting module 28912 may transmit data (e.g., sensor data) either directly to the edge device 28704, or to an intermediate device (e.g., a collection device 206 or another sensor device 28702) that routes the data towards the edge device 28704. In embodiments, the edge reporting module 28912 obtains raw sensor data from a sensing component 28902 or from a storage device 28904 and packetizes the raw sensor data into a reporting packet 28920.

FIG. 289B illustrates an example reporting packet 28920 according to some embodiments of the present disclosure. In some of these embodiments, the edge reporting module 28912 may populate a reporting packet template to obtain a reporting packet 28920. In embodiments, a reporting packet 28920 may include a first field 28922 indicating a sensor ID of the sensor 28702 and a second field 28926 indicating the sensor data. Additionally, the reporting packet 28920 may include additional fields, such as a routing data field 28924 indicating a destination of the packet (e.g., an address or identifier of the edge device 28704), a time stamp field 28928 indicating a time stamp, and/or a checksum field 28930 indicating a checksum (e.g., a hash value of the contents of the reporting packet). The reporting packet may include additional or alternative fields (e.g., error codes) without departing from the scope of the disclosure.

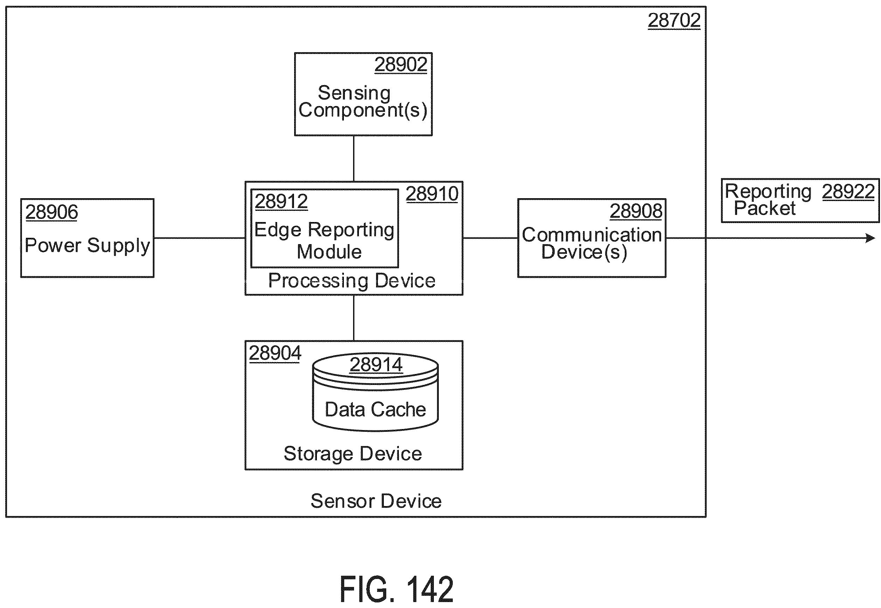

Referring back to FIG. 142, in embodiments, the edge reporting module 28912 may generate a reporting packet 28920 for each instance of sensor data. Alternatively, the edge reporting module 28912 may generate a reporting packet 28920 that includes a batch of sensor data (e.g., the previous N sensor readings or all the sensor readings maintained in a cache 28914 of the sensor 28702 since the cache 28914 was last purged). Upon generating a reporting packet 28920, the edge reporting module 28912 may output the reporting packet 28920 to the communication device 28908, which transmits the reporting packet 28920 to the edge device 28704 (either directly or via one or more intermediate devices). The edge reporting module 28912 may generate and transmit reporting packets 28920 at predetermined intervals (e.g., every second, every minute, every hour), continuously, or upon being triggered (e.g., upon being activated via the power supply or upon being command by the edge device 28704).

In embodiments, the edge reporting module 28912 instructs the sensing component(s) 28902 to capture sensor data. In embodiments, the edge reporting module 28912 may instruct a sensing component 28902 to capture sensor data at predetermined intervals. For example, the edge reporting module 28912 may instruct the sensing component 28902 to capture sensor data every second, every minute, or every hour. In embodiments, the edge reporting module 28912 may instruct a sensing component 28902 to capture sensor data upon the power supply 28906 being energized. For example, the power supply 28906 may be energized by a radio frequency or upon a pressure-switch being activated and closing a circuit. In embodiments, the edge reporting module 28912 may instruct a sensing component 28902 to capture sensor data in response to receiving a command to report sensor data from the edge device 28704 or a human user (e.g., in response to the user pressing a button).

In embodiments, a sensor 28702 includes a housing (not shown). The sensor housing may have any suitable form factor. In embodiments where the sensor 28702 is being used outdoors, the sensor may have a housing that is waterproof and/or resistant to extreme cold and/or extreme heat. In embodiments, the housing may have suitable coupling mechanisms to removably couple to an industrial component.

The foregoing is an example of a sensor 28702. The sensor 28702 may have additional or alternative components without departing from the scope of the disclosure.

FIG. 290 illustrates an example of an edge device 28704. In embodiments, the edge device 28704 may include a storage system 29002, a communication system 29004, and a processing system 29006. The edge device 28704 may include additional components not shown, such as a power supply, a user interface, and the like.

The storage system 29002 includes one or more storage devices. The storage devices may include persistent storage mediums (e.g., flash memory drive, hard disk drive) and/or transient storage devices (e.g., RAM). The storage system 29002 may store one or more data stores. A data store may include one or more databases, tables, indexes, records, filesystems, folders and/or files. In the illustrated embodiments, the storage device stores a configuration data store 29010, a sensor data store 29012, and a model data store 29014. A storage system 29002 may store additional or alternative data stores without departing from the scope of the disclosure.

In embodiments, the configuration data store 29010 stores data relating to the configuration of the sensor kit 28700, including the devices of the sensor kit 28700. In some embodiments, the configuration data store 29010 may maintain a set of device records. The device records may indicate a device identifier that uniquely identifies a device of the sensor kit 28700. The device records may further indicate the type of device (e.g., a sensor, a collection device, a gateway device, etc.). In embodiments where the network paths from each device to the edge device 28704 do not change, a device record may also indicate the network path of the device to the edge device 28704 (e.g., any intermediate devices in the device's network path). In the case that a device record corresponds to a sensor 28702, the device record may indicate the type of sensor (e.g., a sensor type identifier) and/or a type of data that is provided by the sensor 28702.

In embodiments, the configuration data store 29010 may maintain a set of sensor type records, where each record corresponds to a different type of sensor 28702 in the sensor kit 28700. A sensor type record may indicate a type identifier that identifies the type of sensor and/or the type of sensor data provided by the sensor. In embodiments, a sensor type record may further indicate relevant information relating to the sensor data, including maximum or minimum values of the sensor data, error codes output by sensors 28702 of the sensor type, and the like.

In embodiments, the configuration data store 29010 may maintain a map of the sensor kit network 200. The map of the sensor kit network 200 may indicate a network topology of the sensor kit network 200, including network paths of the collection of devices in the sensor kit 28700. In some embodiments, the map may include physical locations of the sensors as well. The physical location of a sensor 28702 may be defined as a room or area that the sensor 28702 is in, a specific industrial component that the sensor 28702 is monitoring, a set of coordinates relative of the edge device 28704 (e.g., x, y, z coordinates relative to the edge device 28704, or an angle and distance of the sensor 28702 relative to the edge device 28704), an estimated longitude and latitude of the sensor 28702, or any other suitable format of relative or absolute location determination and/or measurement.

In embodiments, a sensor data store stores 29012 stores sensor data collected from the sensors 28702 of the sensor kit 28700. In embodiments, the sensor data store 29012 maintains sensor data that is collected over a period of time. In some of these embodiments, the sensor data store 29012 may be a cache that stores sensor data until it is reported and backed up at the backend system 28750. In these embodiments, the cache may be cleared when sensor data is reported to the backend system 28750. In some embodiments, the sensor data store 29012 stores all sensor data collected by the sensor kit 29012. In these embodiments, the sensor data store 29012 may provide a backup for all the sensor data collected by the sensor kit 28700 over time, thereby ensuring that the owner of the sensor kit 28700 maintains ownership of its data.

In embodiments, a model data store 29014 stores machine-learned models. The machine-learned models may include any suitable type of models, including neural networks, deep neural networks, recursive neural networks, Bayesian neural networks, regression-based models, decision trees, prediction trees, classification trees, Hidden Markov Models, and/or any other suitable types of models. A machine-learned model may be trained on training data, which may be expert generated data, historical data, and/or outcome-based data. Outcome-based data may be data that is collected after a prediction or classification is made that indicates whether the prediction or classification was correct or incorrect and/or a realized outcome. A training data instance may refer to a unit of training data that includes a set of features and a label. In embodiments, the label in a training data instance may indicate a condition of an industrial component or an industrial setting 28720 at a given time. Examples of conditions will vary greatly depending on the industrial setting 28720 and the conditions that the machine-learned model is being trained to predict or classify. Examples of labels in a manufacturing facility may include, but are not limited to, no issues detected, a mechanical failure of a component, an electrical failure of a component, a chemical leak detected, and the like. Examples of labels in a mining facility may include, but are not limited to, no issues detected, an oxygen deficiency, the presence of a toxic gas, a failing structural component, and the like. Examples of labels in an oil and/or gas facility (e.g., oil field, gas field, oil refinery, pipeline) may include, but are not limited to, no issues detected, a mechanical failure of a component (e.g., a failed valve or failed O-ring), a leak, and the like. Examples of labels in an indoor agricultural facility may include, but are not limited to, no issues detected, a plant died, a plant wilted, a plant turned a certain color (e.g., brown, purple, orange, or yellow), mold found, and the like. In each of these examples, there are certain features that may be relevant to a condition and some features that may have little or no bearing on the condition. Through a machine-learning process (which may be performed at the backend system 28750 or another system), the model is trained to determine predictions or classifications based on a set of features. Thus, the set of features in a training data instance may include sensor data that is temporally proximate to a time when a condition of the industrial component or industrial setting 28720 occurred (e.g., the label associated with the industrial component or industrial setting 28720).

In embodiments, the machine-learned models may include prediction models that are used to predict potential issues relating to an industrial component being monitored. In some of these embodiments, a machine-learned model may be trained on training data (expert generated data and/or historical data) that corresponds to one or more conditions relating to a particular component. In some of these embodiments, the training data sets may include sensor data corresponding to scenarios where maintenance or some intervening action was later required and sensor data corresponding to scenarios where maintenance or some intervening action was ultimately not required. In these example embodiments, the machine-learned model may be used to determine a prediction of one or more potential issues that may arise with respect to one or more industrial components being monitored and/or the industrial setting 28720 being monitored.

In embodiments, the machine-learned models may include classification models that classify a condition of an industrial component being monitored and/or the industrial setting 28720. In some of these embodiments, a machine-learned model may be trained on training data (e.g., expert generated data and/or historical data) that corresponds to one or more conditions relating to a particular component. In some of these embodiments, the training data sets may include sensor data corresponding to scenarios where respective industrial components and/or respective industrial settings 28720 were operating in a normal condition and sensor data where the respective industrial components and/or respective industrial settings 28720 were operating in an abnormal condition. In training data instances where there was an abnormal condition, the training data instance may include a label indicating the type of abnormal condition. For example, a training data instance corresponding to an indoor agricultural facility that was deemed too humid for ideal growing conditions may include a label that indicates the facility was too humid.

In embodiments, the communication system 29004 includes two or more communication devices, including at least one internal communication device that communicates with the sensor kit network 200 and at least one external communication device that communicates with a public communication network (e.g., the Internet) either directly or via a gateway device. The at least one internal communication devices may include Bluetooth chips, Zigbee chips, XBee chips, Wi-Fi chips, and the like. The selection of the internal communication devices may depend on the environment of the industrial setting 28720 and the impacts thereof on the sensors 28702 to be installed therein (e.g., whether the sensors 28702 have reliable power sources, whether the sensors 28702 will be spaced in proximity to one another, whether the sensors 28702 need to transmit through walls, and the like). The external communication devices may perform wired or wireless communication. In embodiments, the external communication devices may include cellular chipsets (e.g., 4G or 5G chipsets), Ethernet cards, satellite communication cards, or other suitable communication devices. The external communication device(s) of an edge device 28704 may be selected based on the environment of the industrial setting 28720 (e.g., indoors v. outdoors, thick walls that prevent wireless communication v. thin walls that allow wireless communication, located near cellphone towers v. located in remote areas) and the preferences of an operator of the industrial setting 28720 (e.g., the operator allows the edge device 28704 to access a private network of the industrial setting 28720, or the operator does not allow the edge device 28704 to access a private network of the industrial setting 28720).

In embodiments, the processing system 29006 may include one or more memory devices (e.g., ROM and/or RAM) that store computer-executable instructions and one or more processors that execute the computer-executable instructions. The processing system 29006 may execute one or more of a data processing module 29020, an encoding module 29022, a quick-decision AI module 29024, a notification module 29026, a configuration module 29028, and a distributed ledger module 29030. The processing system 29006 may execute additional or alternative modules without departing from the scope of the disclosure. Furthermore, the modules discussed herein may include submodules that perform one or more functions of a respective module.

In embodiments, the data processing module 29020 receives sensor data from the sensor kit network 200 and performs one or more data processing operations on the received sensor data. In embodiments, the data processing module 29020 receives reporting packets 320 containing sensor data. In some of these embodiments, the data processing module 29020 may filter data records that are duplicative (e.g., filtering out one out of two reporting packets 320 received from two respective sensors monitoring the same component for redundancy). The data processing module 29020 may additionally or alternatively filter and/or flag reporting packets 320 containing sensor data that is clearly erroneous (e.g., sensor not within a tolerance range given the type of sensor 28702 or contains an error code). In embodiments, the data processing module 29020 may store and/or index the sensor data in the sensor data store.

In embodiments, the data processing module 29020 may aggregate sensor data received over a period of time from the sensors 28702 of the sensor kit 28700 or a subset thereof and may transmit the sensor data to the backend system 28750. In transmitting sensor data to the backend system 28750, the data processing module 29020 may generate a sensor kit reporting packet that includes one or more instances of sensor data. The sensor data in the sensor kit reporting packet may be compressed or uncompressed. In embodiments, the sensor kit reporting packet may indicate a sensor kit identifier that identifies the source of the data packet to the backend system 28750. In embodiments, the data processing module 29020 may transmit the sensor data upon receipt of the sensor data from a sensor 28702, at predetermined intervals (e.g., every second, every minute, every hour, every day), or in response to a triggering condition (e.g., a prediction or classification that there is an issue with an industrial component or the industrial setting 28720 based on received sensor data). In some embodiments, the sensor data may be encoded/compressed, such that sensor data collected from multiple sensors 28702 and/or over a period of time may be more efficiently transmitted. In embodiments, the data processing module 29020 may leverage the quick-decision AI module 29024 to determine whether the industrial components of the industrial setting 28720 and/or the industrial setting 28720 itself is likely in a normal condition. If the quick-decision AI module 29024 determines that the industrial components and/or the industrial setting 28720 are in a normal condition with a high degree of certainty, then the data processing module 29020 may delay or forgo transmitting the sensor data used to make the classification to the backend system 28750. Additionally or alternatively, if the quick-decision AI module 29024 determines that the industrial components and/or the industrial setting 28720 are in a normal condition with a high degree of certainty, then the data processing module 29020 may compress the sensor data and may be compressed at a greater rate. The data processing module 29020 may perform additional or alternative functions without departing from the scope of the disclosure.

In embodiments, the encoding module 29022 receives sensor data and may encode, compress, and/or encrypt the sensor data. The encoding module 29022 may employ other techniques to compress the sensor data. In embodiments, the encoding module 29022 may employ horizontal or compression techniques to compress the sensor data. For example, the encoding module 29022 may use the Lempel-Zev-Welch algorithm or variations thereof. In some embodiments, the encoding module 522 may represent sensor data in an original integer or "counts format" and with relevant calibration coefficients and offsets at the time of collection. In these embodiments, the coefficients and offsets may be coalesced at the time of collection when a precise signal path is known, such that one floating-point coefficient and one integer offset is stored for each channel.

In embodiments, the encoding module 29022 may employ one or more codecs to compress the sensor data. The codecs may be proprietary codecs and/or publicly available codecs. In some embodiments, the encoding module 29022 may use a media compression codec (e.g., a video compression codec) to compress the sensor data. For example, the encoding module 29022 may normalize the sensor data into values that fall within a range and format of a media frame (e.g., normalizing sensor data into acceptable pixel values for inclusion into a video frame) and may embed the normalized sensor data into the media frame. The encoding module 29022 may embed the normalized sensor data collected from the sensors 28702 of the sensor kit 28700 into the media frame according to a predefined mapping (e.g., a mapping of respective sensors 28702 to one or more respective pixels in a media frame). The encoding module 29022 may generate a set of consecutive media frames in this manner and may compress the media frames using a media codec (an H.264/MPEG-4 codec, an H.265/MPEG-H codec, an H.263/MPEG-4 codec, proprietary codecs, and the like) to obtain a sensor data encoding. The encoding module 29022 may then transmit sensor data encoding to the backend system, which may decompress and recalculate the sensor data based on the normalized values. In these embodiments, the codec used for compression and the mappings of sensors to pixels may be selected to reduce lossiness or to increase compression rates. Furthermore, the foregoing technique may be applied to sensor data that tends to be more static and less changing between samplings and/or where sensor data collected from different sensors tend to have little variation when sampled at the same time. The encoding module 29022 may employ additional or alternative encoding/compression techniques without departing from the scope of the disclosure.

In embodiments, the quick-decision AI module 29024 may utilize a limited set of machine-learned models to generate predictions and/or classifications of a condition of an industrial component being monitored and/or of the industrial setting 28720 being monitored. In embodiments, the quick-decision AI module 29024 may receive a set of features (e.g., one or more sensor data values) and request for a specific type of prediction or classification based thereon. In embodiments, the quick-decision AI module 29024 may leverage a machine-learned model corresponding to the requested prediction or classification. The quick-decision AI module 29024 may generate a feature vector based on the received features, such that the feature vector includes one or more sensor data values obtained from one or more sensors 28702 of the sensor kit 28700. The quick-decision AI module 29024 may feed the feature vector to the machine-learned model. The machine-learned model may output a prediction or classification and a degree of confidence in the prediction or classification. In embodiments, the quick-decision AI module 29024 may output the prediction or classification to the data processing module 29020 (or another module that requested a prediction or classification). For example, in embodiments the data processing module 29020 may use classifications that the industrial components and/or the industrial setting 28720 are in a normal condition to delay or forgo transmission of sensor data and/or to compress sensor data. In embodiments, the data processing module 29020 may use a prediction or classification that the industrial components and/or the industrial setting 28720 are likely to encounter a malfunction to transmit uncompressed sensor data to the backend system 28750, which may further analyze the sensor data and/or notify a human user of a potential issue.

In embodiments, the notification module 29026 may provide notifications or alarms to users based on the sensor data. In some of these embodiments, the notification module 29026 may apply a set of rules that trigger a notification or alarm if certain conditions are met. The conditions may define sensor data values that are strongly correlated with an undesirable (e.g., emergency) condition. Upon receiving sensor data from the data processing module 29020, the notification module 29026 may apply one or more rules to the sensor data. If the conditions to trigger an alarm or notification are met, the notification module 29026 may issue an alarm or notification to a human user. The manner by which an alarm or notification is provided to the human user (e.g., to a user device, or triggering an audible alarm) may be predefined or, in some embodiments, may be defined by an operator of the industrial setting 28720.

In embodiments, the configuration module 29028 configures the sensor kit network 200. In embodiments, the configuration module 29028 may transmit configuration requests to the other devices in the sensor kit 28700, upon the sensors 28702, edge device 28704, and any other devices being installed in the industrial setting 28720. In some of these embodiments, the sensors 28702 and/or other devices may establish a mesh network or a hierarchical network in response to the configuration requests. In embodiments, the sensors 28702 and other devices in the sensor kit network may respond to the configuration requests, in response to the configuration requests. In embodiments, the configuration module 29028 may generate device records corresponding to the devices that responded based on the device IDs of those devices and any additional data provided in the responses to the configuration requests.

In embodiments, the configuration module 29028 adds new devices to the sensor kit 28700. In these embodiments, the configuration module 29028 adds new sensors 28702 to the sensor kit 28700 post-installation in a plug-and-play-like manner. In some of these embodiments, the communication devices 29004, 308 of the edge device 28704 and the sensors 28702 (or other devices to be added to the sensor kit 28700) may include respective short-range communication capabilities (e.g., near-field communication (NFC) chips). In these embodiments, the sensors 28702 may include persistent storage that stores identifying data (e.g., a sensor id value) and any other data that would be used to add the sensor to the sensor kit (e.g., device type, supported communication protocols, and the like). In response to a user initiating a post-installation addition to the sensor kit 28700 (e.g., the user pressing a button on the edge device 28704 and/or bringing the sensor 28702 into the vicinity of the edge device 28704), the configuration module 29028 may cause the communication system 29004 to emit a signal (e.g., a radio frequency). The emitted signal may trigger a sensor 28702 proximate enough to receive the signal to transmit its sensor ID and any other suitable configuration data (e.g., device type, communication protocols, and the like). In response to the sensor 28702 transmitting its configuration data (sensor ID and other relevant configuration data) to the edge device 28704, the configuration module 29028 may add the new sensor 28702 to the sensor kit 28702. In embodiments, adding the sensor 28702 to the sensor kit 28704 may include generating a new device record corresponding to the new sensor 28702 based on the sensor id updating the configuration data store 29010 with the new device record. The configuration module 29028 may add a new sensor 28702 to the sensor kit 28700 in any other suitable manner.

In embodiments, the edge device 28704 may include a distributed ledger module 29030. In embodiments, the distributed ledger module 29030 may be configured to update a distributed ledger 28762 with sensor data captured by the sensor kit 28700. In embodiments, the distributed ledger may be distributed amongst a plurality of node computing devices 28760. As discussed, in embodiments, a distributed ledger 28762 is comprised of a set of linked data structures (e.g., blocks, data records, etc.). For purposes of explanation, the data structures will be referred to as blocks.

As discussed, each block may include a header that includes a unique ID of the block and a body that includes the data that is stored in the block and a pointer of a parent block. In embodiments, the pointer in the block is the block ID of a parent block of the block. The data stored in a respective block can be sensor data captured by a respective sensor kit 28700. Depending on the implementation, the types of sensor data and the amount of sensor data stored in a respective body of a block may vary. For example, a block may store a set of sensor measurements from one or more types of sensors 28702 in the sensor kit 28700 captured over a period of time (e.g., sensor data 28702 captured from all of the sensors 28702 in the sensor kit 28700 over a period one hour or one day) and metadata relating thereto (e.g., sensor IDs of each sensor measurement and a timestamp of each sensor measurement or group of sensor measurements). In some embodiments, a block may store sensor measurements determined to be anomalous (e.g., outside a standard deviation of expected sensor measurements or deltas in sensor measurements that are above a threshold) and/or sensor measurements indicative of an issue or potential issue, and related metadata (e.g., sensor IDs of each sensor measurement and a timestamp of each sensor measurement or group of sensor measurements). In some embodiments, the sensor data stored in a block may be compressed and/or encoded sensor data, such that the encoding module 29022 compresses/encodes the sensor data into a more compact format. In embodiments, the distributed ledger module 29030 may generate a hash of the body, such that the contents of the body (e.g., block ID of the parent block and the sensor data) are hashed and cannot be altered without changing the value of the hash. In embodiments, the distributed ledger module 29030 may encrypt the content within the block, so that the content may not be read by unauthorized devices.

In embodiments, the distributed ledger module 29030 generates a block in response to a triggering event. Examples of triggering events may include a predetermined time (e.g., every minute, every hour, every day), when a potential issue is classified or predicted, when one or more sensor measurements are outside of a tolerance threshold, or the like. In response to the triggering event, the distributed ledger module 29030 may generate a block based on sensor data that is to be reported. Depending on the configuration of the server kit 28700 and the intended use of the distributed ledger 28762, the amount of data and type of data that is included in a block may vary. For example, in a manufacturing or resource extraction setting such as the manufacturing facility 1700 or the underwater industrial setting 1800, the distributed ledger 28762 may be used to demonstrate functional machinery and/or to predict maintenance needs. In this example, the distributed ledger module 29030 may be accessible by insurance providers to set insurance rates and/or issue refunds. Thus, in this example, the distributed ledger module 29030 may include any sensor measurements (and related metadata) that are outside of a tolerance threshold or instance where an issue is classified or predicted. In another example, the distributed ledger may be accessible by a regulatory body to ensure that a facility is operating in accordance with one or more regulations. In these embodiments, the distributed ledger module 29030 may store a set of one or more sensor measurements (and related metadata) in a block, such that the sensor measurements may be analyzed by the regulatory agency. In some of these embodiments, the sensor measurements may be compressed to store more sensor data in a single block. In response to generating a block, the distributed ledger module 29030 may transmit the block to one or more node computing devices 28760. Upon the block being verified (e.g., using a consensus mechanism), each node computing device 28760 may update the distributed ledger 28762 with the new block.

As discussed, in some embodiments the distributed ledger may further include smart contracts. Once written, a smart contract may be encoded in a block and deployed to the distributed ledger 28762. The address of the smart contract (e.g., the block ID of the block containing the smart contract) may be provided to one or more parties to the smart contract, such that respective parties may invoke the smart contract using the address. In some of these embodiments, the address of the smart contract may be provided to the distributed ledger module 29030, such that the distributed ledger module 29030 may report items to the smart contract. In some embodiments, the distributed ledger module 29030 may leverage the API of a smart contract to report the items to the smart contract.

In example implementations discussed above, an insurer may utilize a smart contract to allow insured facility owners and/or operators to demonstrate that the equipment in the facility is functioning properly. In some embodiments, the smart contract may trigger the issuance of rebates or refunds on portions of insurance premiums when an owner and/or operator of a facility provides sufficient sensor data that indicates the facility is operating without issue. In some of these embodiments, the smart contract may include a first condition that requires a certain amount of sensor data to be reported by a facility and a second condition that each instance of the sensor data equals a value (e.g., no classified or predicted issues) or range of values (e.g., all sensor measurements within a predefined range of values). In some embodiments, the action may be to deposit funds (e.g., a wire transfer or cryptocurrency) into an account in response to the first and second conditions being met. In this example, the distributed ledger module 29030 may write blocks containing sensor data to the distributed ledger 28762. The distributed ledger module 29030 may also provide the addresses of these blocks to the smart contract (e.g., via an API of the smart contract). Upon the smart contract verifying the first and second conditions of the contract, the smart contract may initiate the transfer of funds from an account of the insurer to the account of the insured.

In another example discussed above, a regulatory body (e.g., a state, local, or federal regulatory agency) may utilize a smart contract that monitors facilities (e.g., food inspection facilities, pharmaceutical manufacturing facilities, indoor agricultural facilities, offshore oil extraction facilities, or the like) based on reported sensor data to ensure compliance with one or more regulations. In embodiments, the smart contract may be configured to receive and verify the sensor data from a facility (e.g., via an API of the smart contract), and in response to verifying the sensor data issues a compliance token (or certificate) to an account of the facility owner. In some of these embodiments, the smart contract may include a first condition that requires a certain amount of sensor data to be reported by a facility and a second condition that requires the sensor data to be compliant with the reporting regulations. In this example, the distributed ledger module 29030 may write blocks containing sensor data to the distributed ledger. The sensor kit 28700 may also provide the addresses of these blocks to the smart contract (e.g., using an API of the smart contract). Upon the smart contract verifying the first and second conditions of the contract, the smart contract may generate a token indicating compliance by the facility operator, and may initiate the transfer of funds to an account (e.g., a digital wallet) associated with the facility.

FIG. 291 illustrates an example backend system 28750 according to some embodiments of the present disclosure. In embodiments, the backend system 28750 may be implemented as a cloud service that is executed at one or more physical server devices. In embodiments, the backend system 28750 may include a storage system 29102, a communication system 29104, and a processing system 29106. The backend system 28750 may include additional components not shown.

A storage system 29102 includes one or more storage devices. The storage devices may include persistent storage mediums (e.g., flash memory drive, hard disk drive) and/or transient storage devices (e.g., RAM). The storage system 29102 may store one or more data stores. A data store may include one or more databases, tables, indexes, records, filesystems, folders and/or files. In the illustrated embodiments, the storage system 29102 stores a sensor kit data store 29110 and a model data store 29112. A storage system 29102 may store additional or alternative data stores without departing from the scope of the disclosure.

In embodiments, the sensor kit data store 29110 stores data relating to respective sensor kits 28700. In embodiments, the sensor kit data store 29110 may store sensor kit data corresponding to each installed sensor kit 28700. In embodiments, the sensor kit data may indicate the devices in a sensor kit 28700, including each sensor 28702 (e.g., a sensor ID) in the sensor kit 28700. In some embodiments, the sensor kit data may indicate the sensor data captured by the sensor kit 28700. In some of these embodiments, the sensor kit data may identify each instance of sensor data captured by the sensor kit 28700, and for each instance of sensor data, the sensor kit data may indicate the sensor 28702 that captured the sensor data and, in some embodiments, a time stamp corresponding to the sensor data.

In embodiments, the model data store 29112 stores machine-learned models that are trained by the AI system 29124 based on training data. The machine-learned models may include prediction models and classification models. In embodiments, the training data used to train a particular model includes data collected from one or more sensor kits 28700 that monitor the same type of industrial setting 28720. The training data may additionally or alternatively may include historical data and/or expert generated data. In embodiments, each machine-learned model may pertain to a respective type of industrial setting 28720. In some of these embodiments, the AI system 29124 may periodically update a machine-learned model pertaining to a type of industrial setting 28720 based on sensor data collected from sensor kits 28700 monitoring those types of industrial setting 28720 and outcomes obtained from those industrial setting 28720. In embodiments, machine-learned models pertaining to a type of industrial setting 28720 may be provided to the edge devices 28704 of sensor kits 28700 monitoring that type of industrial setting 28720.

In embodiments, a communication system 29104 includes one or more communication devices, including at least one external communication device that communicates with a public communication network (e.g., the Internet) ether. The external communication devices may perform wired or wireless communication. In embodiments, the external communication devices may include cellular chipsets (e.g., 4G or 5G chipsets), Ethernet cards and/or Wi-Fi cards, or other suitable communication devices.

In embodiments, the processing system 29106 may include one or more memory devices (e.g., ROM and/or RAM) that store computer-executable instructions and one or more processors that execute the computer-executable instructions. The processors may execute in a parallel or distributed manner. The processors may be located in the same physical server device or in different server devices. The processing system 29106 may execute one or more of a decoding module 29120, a data processing module 29122, an AI module 29124, a notification module 29126, an analytics module 29128, a control module 29130, a dashboard module 29132, a configuration module 29134, and a distributed ledger management module 29136. The processing system 406 may execute additional or alternative modules without departing from the scope of the disclosure. Furthermore, the modules discussed herein may include submodules that perform one or more functions of a respective module.

In embodiments, a sensor kit 28700 may transmit encoded sensor kit packets containing sensor data to the backend system 28750. In these embodiments, the decoding module 29120 may receive encoded sensor data from an edge device 28704 and may decrypt, decode, and/or decompress the encoded sensor kit packets to obtain the sensor data and metadata relating to the received sensor data (e.g., a sensor kit id and one or more sensor ids of sensors that captured the sensor data). The decoding module 29120 may output the sensor data and any other metadata to the data processing module 29122.

In embodiments, the data processing module 29122 may process the sensor data received from the sensor kits 28700. In some embodiments, the data processing module 29122 may receive the sensor data and may store the sensor data in the sensor kit data store 29110 in relation to the sensor kit 28700 that provided to the sensor data. In embodiments, the data processing system 29122 may provide AI-related requests to the AI module 29124. In these embodiments, the data processing system 29122 may extract relevant sensor data instances from the received sensor data and may provide the extracted sensor data instances to the AI module 29124 in a request that indicates the type of request (e.g., what type of prediction or classification) and the sensor data to be used. In the event a potential issue is predicted or classified, the data processing module 29122 may execute a workflow associated with the potential issue. A workflow may define the manner by which a potential issue is handled. For instance, the workflow may indicate that a notification should be transmitted to a human user, a remedial action should be initiated, and/or other suitable actions. The data processing module 29122 may perform additional or alternative processing tasks without departing from the scope of the disclosure.

In embodiments, the AI module 29124 trains machine-learned models that are used to make predictions or classifications. The machine-learned models may include any suitable type of models, including neural networks, deep neural networks, recursive neural networks, Bayesian neural networks, regression-based models, decision trees, prediction trees, classification trees, Hidden Markov Models, and/or any other suitable types of models. The AI module 29124 may train a machine-learned model on a training data set. A training data set may include expert-generated data, historical data, and/or outcome-based data. Outcome-based data may be data that is collected after a prediction or classification is made that indicates whether the prediction or classification was correct or incorrect and/or a realized outcome. A training data instance may refer to a unit of training data that includes a set of features and a label. In embodiments, the label in a training data instance may indicate a condition of an industrial component or an industrial setting 28720 at a given time. Examples of conditions will vary greatly depending on the industrial setting 28720 and the conditions that the machine-learning model is being trained to predict or classify. Examples of labels in a manufacturing facility may include, but are not limited to, no issues detected, a mechanical failure of a component, an electrical failure of a component, a chemical leak detected, and the like. Examples of labels in a mining facility may include, but are not limited to, no issues detected, an oxygen deficiency, the presence of a toxic gas, a failing structural component, and the like. Examples of labels in an oil and/or gas facility (e.g., oil field, gas field, oil refinery, pipeline) may include, but are not limited to, no issues detected, a mechanical failure of a component (e.g., a failed valve or failed O-ring), a leak, and the like. Examples of labels in an indoor agricultural facility may include, but are not limited to, no issues detected, a plant died, a plant wilted, a plant turned a certain color (e.g., brown, purple, orange, or yellow), mold found, and the like. In each of these examples, there are certain features that may be relevant to a condition and some features that may have little or no bearing on the condition. In embodiments, the AI module 29124 may reinforce the machine-learned models as more sensor data and outcomes relating to the machine-learned models are received. In embodiments, the machine-learned models may be stored in the model data store 29112. Each model may be stored with a model identifier, which may be indicative of (e.g., mapped to) the type of industrial setting 28720 that the model makes, the type of prediction or classification made by the model, and the features that the model receives. In some embodiments, one or more machine-learned models (and subsequent updates thereto) may be pushed to respective sensor kits 28700, whereby the edge devices 28704 of the respective sensor kits 28700 may use one or more machine-learned model to make predictions and/or classifications without having to rely on the backend system 28750.

In embodiments, the AI module 29124 receives requests for predictions and/or classifications and determines predictions and/or classifications based on the requests. In embodiments, a request may indicate a type of prediction or classification that is being requested and may include a set of features for making the prediction or classification. In response to the request, the AI module 29124 may select a machine-learned model to leverage based on the type of prediction or classification being requested, whereby the selected model receives a certain set of features. The AI module 29124 may then generate a feature vector that includes one or more instances of sensor data and may feed the feature vector into the selected model. In response to the feature vector, the selected model may output a prediction or classification, and a degree of confidence (e.g., a confidence score) in the prediction or classification. The AI module 29124 may output the prediction or classification, as well as the degree of confidence therein, to the module that provided the request.

In embodiments, the notification module 29126 may issue notifications to users and/or respective industrial setting 28720 when an issue is detected in a respective setting. In embodiments, a notification may be sent to a user device of a user indicating the nature of the issue. The notification module 29126 may implement an API (e.g., a REST API), whereby a user device of a user associated with the industrial setting 28720 may request notifications from the backend system 28750. In response to the request, the notification module 29126 may provide any notifications, if any, to the user device. In embodiments, a notification may be sent to a device located at an industrial setting 28720, whereby the device may raise an alarm at the industrial setting 28720 in response to the industrial setting 28720.

In embodiments, the analytics module 29128 may perform analytics related tasks on sensor data collected by the backend system 28750 and stored in the sensor kit data store 29110. In embodiments, the analytics tasks may be performed on sensor data received from individual sensor kits. Additionally, or alternatively, the analytics tasks may be performed on sensor data Examples of analytics tasks that may be performed on sensor data obtained from various sensor kits 28700 monitoring different industrial setting 28720. Examples of analytics tasks may include energy utilization analytics, quality analytics, process optimization analytics, financial analytics, predictive analytics, yield optimization analytics, fault prediction analytics, scenario planning analytics, and many others.

In embodiments, the control module 29130 may control one or more aspects of an industrial setting 28720 based on a determination made by the AI system 29124. In embodiments, the control module 29130 may be configured to provide commands to a device or system at the industrial setting 28720 to take a remedial action in response to a particular issue being detected. For example, the control module 29130 may issue a command to a manufacturing facility to stop an assembly line in response to a determination that a critical component on the assembly line is likely failing or likely failed. In another example, the control module 29130 may issue a command to an agricultural facility to activate a dehumidifier in response to a determination that the humidity levels are too high in the facility. In another example, the control module 29130 may issue a command to shut a valve in an oil pipeline in response to a determination that a component in the oil pipeline downstream to the valve is likely failing or likely failed. For a particular industrial setting 28720, the control module 29130 may perform remedial actions defined by a human user associated with the industrial setting 28720, such that the human user may define what conditions may trigger the remedial action.

In embodiments, the dashboard module 29132 presents a dashboard to human users via a user device 28740 associated with the human user. In embodiments, the dashboard provides a graphical user interface that allows the human user to view relating to a sensor kit 28700 with which the human user is associated (e.g., an employee at the industrial setting 28720). In these embodiments, the dashboard module 29132 may retrieve and display raw sensor data provided by the sensor kit, analytical data relating to the sensor data provided by the sensor kit 28700, predictions or classifications made by the backend system 28750 based on the sensor data, and the like.

In embodiments, the dashboard module 29132 allows human users to configure aspects of the sensor kits 28700. In embodiments, the dashboard module 29132 may present a graphical user interface that allows a human user to configure one or more aspects of a sensor kit 28700 with which the human user is associated. In embodiments, the dashboard may allow a user to configure alarm limits with respect to one or more sensor types and/or conditions. For example, a user may define a temperature value at which a notification is sent to a human user. In another example, the user may define a set of conditions, which if predicted by the AI module and/or the edge device, trigger an alarm. In embodiments, the dashboard may allow a user to define which users receive a notification when an alarm is triggered. In embodiments, the dashboard may allow a user to subscribe to additional features of the backend system 28750 and/or an edge device 28704.

In embodiments, the dashboard may allow a user to add one or more subscriptions to a sensor kit 28700. The subscriptions may include access to backend services and/or edge services. A user may select a service to add to a sensor kit 28700 and may provide payment information to pay for the services. Upon verification of the payment information, the backend system 28750 may provide the sensor kit 28700 access to those features. Examples of services that may be subscribed to include analytics services, AI-services, notification services, and the like. The dashboard may allow the user to perform additional or alternative configurations.

In embodiments, the configuration module 29134 maintains configurations of respective sensor kits 28700. Initially, when a new sensor kit 28700 is deployed in an industrial setting 28720, the configuration module 29134 may update the sensor kit data store 29110 with the device IDs of each device in the newly installed sensor kit 28700. Once the sensor kit data store 29110 has updated the sensor kit data store 29110 to reflect the newly installed sensor kit 28700, the backend system 28750 may begin storing sensor data from the sensor kit 28700. In embodiments, new sensors 28702 may be added to respective sensor kits 28700. In these embodiments, an edge device 28704 may provide an add request to the backend system 28750 upon an attempt to add a device to the sensor kit 28700. In embodiments, the request may indicate a sensor ID of the new sensor. In response to the request, the configuration module 29134 may add the sensor ID of the new sensor to the sensor kit data of the requesting sensor kit 28700 in the sensor kit data store 29110.

In embodiments, the backend system 28750 includes a distributed ledger management module 29136. In some of these embodiments, the distributed ledger management module 29136 allows a user to update and/or configure a distributed ledger. In some of these embodiments, the distributed ledger management module 29136 allows a user to define or upload a smart contract. As discussed, the smart contract may include one or more conditions that are verified by the smart contract and one or more actions that are triggered when the conditions are verified. In embodiments, the user may provide one or more conditions that are to be verified to the distributed ledger management module 29136 via a user interface. In some of these embodiments, the user may provide the code (e.g., JavaScript code, Java code, C code, C++ code, etc.) that defines the conditions. The user may also provide the actions that are to be performed in response to certain conditions being met. In response to a smart contract being uploaded/-created, the distributed ledger management module 29136 may deploy the smart contract. In embodiments, the distributed ledger management module 29136 may generate a block containing the smart contract. The block may include a header that defines an address of the block, and a body that includes an address to a previous block and the smart contract. In some embodiments, the distributed ledger management module 29136 may determine a hash value based on the body of the block and/or may encrypt the block. The distributed ledger management module 29136 may transmit the block to one or more node computing devices 28760, which in turn update the distributed ledger with the block containing the smart contract. The distributed ledger management module 29136 may further provide the address of the block to one or more parties that may access the smart contract. The distributed ledger management module 29136 may perform additional or alternative functions without departing from the scope of the disclosure.

The backend system 28750 may include additional or alternative components, data stores, and/or modules that are not discussed.

FIG. 292 illustrates an example set of operations of a method 29200 for compressing sensor data obtained by a sensor kit 28700. In embodiments, the method 29200 may be performed by an edge device 28704 of a sensor kit 28700.

At 29210, the edge device 28704 receives sensor data from one or more sensors 28702 of the sensor kit 28700 via a sensor kit network 200. In embodiments, the sensor data from a respective sensor 28702 may be received in a reporting packet. Each reporting packet may include a device identifier of the sensor 28702 that generated the reporting packet and one or more instances of sensor data captured by sensor 28702. The reporting packet may include additional data, such as a timestamp or other metadata.

At 29212, the edge device 28704 processes the sensor data. In embodiments, the edge device 28704 may dedupe any reporting packets that are duplicative. In embodiments, the edge device 28704 may filter out sensor data that is clearly erroneous (e.g., outside of a tolerance range). In embodiments, the edge device 28704 may aggregate the sensor data obtained from multiple sensors 28702. In embodiments, the edge device 28704 may perform one or more AI related tasks, such as determining a prediction or classification relating to a condition of one or more industrial components of the industrial setting 28720. In some of these embodiments, the decision to compress the sensor data may depend on whether the edge device 28704 determines that there are any potential issues with the industrial component. For example, the edge device 28704 may compress the sensor data when there have been no issues predicted or classified. In other embodiments, the edge device 28704 may compress any sensor data that is being transmitted to the backend system or certain types of sensor data (e.g., sensor data obtained from temperature sensors).

At 29214, the edge device 28704 may compress the sensor data. The edge device 28704 may employ any suitable compression techniques for compressing the sensor data. For example, the edge device 28704 may employ vertical or horizontal compression techniques. The edge device 28704 may be configured with a codec that compresses the sensor data. The codec may be a proprietary codec or an "off-the-shelf" codec.

At 29216, the edge device 28704 may transmit the compressed sensor data to the backend system 28750. In embodiments, the edge device 28704 may generate a sensor kit packet that contains the compressed data. The sensor kit packet may designate the source of the sensor kit packet (e.g., a sensor kit ID or edge device ID) and may include additional metadata (e.g., a timestamp). In embodiments, the edge device 28704 may encrypt the sensor kit packet prior to transmitting the sensor kit packet to the backend system 28750. In embodiments, the edge device 28704 transmits the sensor kit packet to the backend system 28750 directly (e.g., via a cellular connection, a network connection, or a satellite uplink). In other embodiments, the edge device 28704 transmits the sensor kit packet to the backend system 28750 via a gateway device, which transmits the sensor kit packet to the backend system 28750 directly (e.g., via a cellular connection or a satellite uplink).

FIG. 293 illustrates an example set of operations of a method 29300 for processing compressed sensor data received from a sensor kit 28700. In embodiments, the method 29300 is executed by a backend system 28750.

At 29310, the backend system 28750 receives compressed sensor data from a sensor kit. In embodiments, the compressed sensor data may be received in a sensor kit packet.

At 29312, the backend system 28750 decompresses the received sensor data. In embodiments, the backend system may utilize a codec to decompress the received sensor data. Prior to decompressing the received sensor data, the backend system 28750 may decrypt a sensor kit packet containing the compressed sensor data.

At 29314, the backend system 28750 performs one or more backend operations on the decompressed sensor data. The backend operations may include storing the data, filtering the data, performing AI-related tasks on the sensor data, issuing one or more notifications in relation to the results of the AI-related tasks, performing one or more analytics related tasks, controlling an industrial component of the industrial setting 28720, and the like.

FIG. 294 illustrates an example set of operations of a method 29400 for streaming sensor data from a sensor kit 28700 to a backend system 28750. In embodiments, the method 29400 may be executed by an edge device 28704 of the sensor kit 28700.

At 29410, the edge device 28704 receives sensor data from one or more sensors 28702 of the sensor kit 28700 via a sensor kit network 28800. In embodiments, the sensor data from a respective sensor 28702 may be received in a reporting packet. Each reporting packet may include a device identifier of the sensor 28702 that generated the reporting packet and one or more instances of sensor data captured by sensor 28702. The reporting packet may include additional data, such as a timestamp or other metadata. In embodiments, the edge device 28704 may process the sensor data. For example, the edge device 28704 may dedupe any reporting packets that are duplicative and/or may filter out sensor data that is clearly erroneous (e.g., outside of a tolerance range). In embodiments, the edge device 28704 may aggregate the sensor data obtained from multiple sensors 28702.

At 29412, the edge device 28704 may normalize and/or transform the sensor data into a media-frame compliant format. In embodiments, the edge device 28704 may normalize and/or transform each sensor data instance into a value that adheres to the restrictions of a media frame that will contain the sensor data. For example, in embodiments where the media frames are video frames, the edge device 28704 may normalize and/or transform instances of sensor data into acceptable pixel frames. The edge device 28704 may employ one or more mappings and/or normalization functions to transform and/or normalize the sensor data.

At 29414, the edge device 28704 may generate a block of media frames based on the transformed and/or normalized sensor data. For example, in embodiments where the media frames are video frames, the edge device 28704 may populate each instance of transformed and/or normalized sensor data into a respective pixel of the video frame. The manner by which the edge device 28704 assigns an instance of transformed and/or normalized sensor data to a respective pixel may be defined in a mapping that maps respective sensors to respective pixel values. In embodiments, the mapping may be defined so as to minimize variance between the values in adjacent pixels. In embodiments, the edge device 28704 may generate a series of time-sequenced media frames, such that each successive media frame corresponds to a subsequent set of sensor data instances.

At 29416, the edge device 28704 may encode the block of the media frame. In embodiments, the edge device 28704 may employ an encoder of a media codec (e.g., a video codec) to compress the block of media frames. The codec may be a proprietary codec or an "off-the-shelf" codec. For example, the media codec may be an H.264/MPEG-4 codec, an H.265/MPEG-H codec, an H.263/MPEG-4 codec, proprietary codecs, and the like. The codec receives the block of media frames and generates an encoded media block based thereon.

At 29418, the edge device 28704 may transmit the encoded media block to the backend system 28750. In embodiments, the edge device 28704 may stream the encoded media blocks to the backend system 28750. Each encoded block may designate the source of the block (e.g., a sensor kit ID or edge device ID) and may include additional metadata (e.g., a timestamp and/or a block identifier). In embodiments, the edge device 28704 may encrypt the encoded media blocks prior to transmitting encoded media blocks to the backend system 28750. The edge device 28704 may transmit the encoded media blocks to the backend system 28750 directly (e.g., via a cellular connection, a network connection, or a satellite uplink) or via a gateway device, which transmits the encoded media block to the backend system 28750 directly (e.g., via a cellular connection or a satellite uplink).

The edge device 28704 may continue to execute the foregoing method 29400, so as to deliver a stream of live sensor data from a sensor kit. The foregoing method 29400 may be performed in settings where there are many sensors deployed within the setting and the sensors are sampled frequently or continuously. In this way, the bandwidth required to provide the sensor data to the backend system is reduced.

FIG. 295 illustrates an example set of operations of a method 29500 for ingesting a sensor data stream from an edge device 28704. In embodiments, the method 29500 is executed by a backend system.

At 29510, the backend system 28750 receives an encoded media block from a sensor kit. The backend system 28750 may receive encoded media blocks as part of a sensor data stream.

At 29512, the backend system 28750 decodes the encoded block using a decoder corresponding to the codec of the codec used to encode the media block to obtain a set of successive media frames. As discussed with respect to the encoding operation, the codec may be a proprietary codec or an "off-the-shelf" codec. For example, the media codec may be an H.264/MPEG-4 codec, an H.265/MPEG-H codec, an H.263/MPEG-4 codec, proprietary codecs, and the like. The codec receives the encoded block of media frames and decodes the encoded block to obtain a set of sequential media frames.

At 29514, the backend system 28750 recreates the sensor data based on the media frame. In embodiments, the backend system 28750 determines the normalized and/or transformed sensor values embedded in each respective media frame. For example, in embodiments where the media frames are video frames, the backend system 28750 may determine pixel values for each pixel in the media frame. A pixel value may correspond to respective sensor 28702 of a sensor kit 28700 and the value may represent a normalized and/transformed instance of sensor data. In embodiments, the backend system 28750 may recreate the sensor data by inversing the normalization and/or transformation of the pixel value. In embodiments, the backend system 28750 may utilize an inverse transformation and/or an inverse normalization function to obtain each recreated sensor data instance.

At 29518, the backend system 28750 performs one or more backend operations based on the recreated sensor data. The backend operations may include storing the data, filtering the data, performing AI-related tasks on the sensor data, issuing one or more notifications in relation to the results of the AI-related tasks, performing one or more analytics related tasks, controlling an industrial component of the industrial setting 28720, and the like.

FIG. 296 illustrates a set of operations of a method 29600 for determining a transmission strategy and/or a storage strategy for sensor data collected by a sensor kit 28700 based on the sensor data. A transmission strategy may define a manner that sensor data is transmitted (if at all) to the backend system. For example, sensor data may be compressed using an aggressive lossy codec, compressed using a lossless codec, and/or transmitted without compression. A storage strategy may define a manner by which sensor data is stored at the edge device 28704. For example, sensor data may be stored permanently (or until a human removes the sensor data), may be stored for a period of time (e.g., one year) or may be discarded. The method 29600 may be executed by an edge device 28704. The method 29600 may be executed to reduce the network bandwidth consumed by the sensor kit 28700 and/or reduce the storage constraints at the edge device 28704.

At 29610, the edge device 28704 receives sensor data from the sensors 28702 of the sensor kit 28700. The data may be received continuously or intermittently. In embodiments, the sensors 28702 may push the sensor data to the edge device 28704 and/or the edge device 28704 may request the sensor data 28702 from the sensors 28702 periodically. In embodiments, the edge device 28704 may process the sensor data upon receipt, including deduping the sensor data.

In embodiments, the edge device 28704 may be configured to perform one or more AI-related tasks prior to transmission via the satellite uplink. In some of these embodiments, the edge device 28704 may be configured to determine whether there are likely no issues relating to any of the components and/or the industrial setting 28720 based on the sensor data and one or more machine-learned models.

At 29612, the edge device 28704 may generate one or more feature vectors based on the sensor data. The feature vectors may include sensor data from a single sensor 28702, a subset of sensors 28702, or all of the sensors 28702 of the sensor kit 28700. In scenarios where a single sensor or a subset of sensors 28702 are included in the feature vector, the machine-learned model may be trained to identify one or more issues relating to an industrial component or the industrial setting 28720, but may not be sufficient to fully deem the entire setting as likely safe/free from issues. Additionally or alternatively, the feature vectors may correspond to a single snapshot in time (e.g., all sensor data in the feature vector corresponds to the same sampling event) or over a period of time (sensor data samples from a most recent sampling event and sensor data samples from previous sampling events). In embodiments where the feature vectors define sensor data from a single snapshot, the machine-learned models may be trained to identify potential issues without any temporal context. In embodiments where the feature vectors define sensor data over a period of time, the machine-learned models may be trained to identify potential issues with the context of what the sensor(s) 28702 was/were reporting previously. In these embodiments, the edge device 28704 may maintain a cache of sensor data that is sampled over a predetermined time (e.g., previous hour, previous day, previous N days), such that the cache is cleared out in a first-in-first-out manner. In these embodiments, the edge device 28704 may retrieve the previous sensor data samples from the cache to use to generate feature vectors that have data samples spanning a period of time.

At 29614, the edge device 28704 may input the one or more feature vectors into one or more respective machine-learned models. A respective model may output a prediction or classification relating to an industrial component and/or the industrial setting 28720, and a confidence score relating to the prediction or classification.

At 29616, the edge device 28704 may determine a transmission strategy and/or a storage strategy based on the output of the machine-learned models. In some embodiments, the edge device 28704 may make determinations relating to the manner by which sensor data is transmitted to the backend system 28750. In some embodiments, the edge device 28704 may make determinations relating to the manner by which sensor data is transmitted to the backend system 28750 and/or stored at the edge device. In some of these embodiments, the edge device 28704 may compress sensor data when there are no likely issues across the entire industrial setting 28720 and individual components of the industrial setting 28720. For example, if the machine-learned models predict that there are likely no issues and classify that there are currently no issues with a high degree of confidence (e.g., the confidence score is greater than .98), the edge device 28704 may compress the sensor data. Alternatively, in the scenario where the machine-learned models predict that there are likely no issues and classify that there are currently no issues with a high degree of confidence, the edge device 28704 may forego transmission but may store the sensor data at the edge device 28704 for a predefined period of time (e.g., a one-year expiry). In scenarios where a machine-learned model predicts a potential issue or classifies a current issue, the edge device 28704 may transmit the sensor data without compressing the sensor data or using a lossless compression codec. Additionally or alternatively, in scenarios where a machine-learned model predicts a potential issue or classifies a current issue, the edge device 28704 may store the sensor data used to make the prediction or classification indefinitely, as well as data that was collected prior to and/or after the condition was predicted or classified.

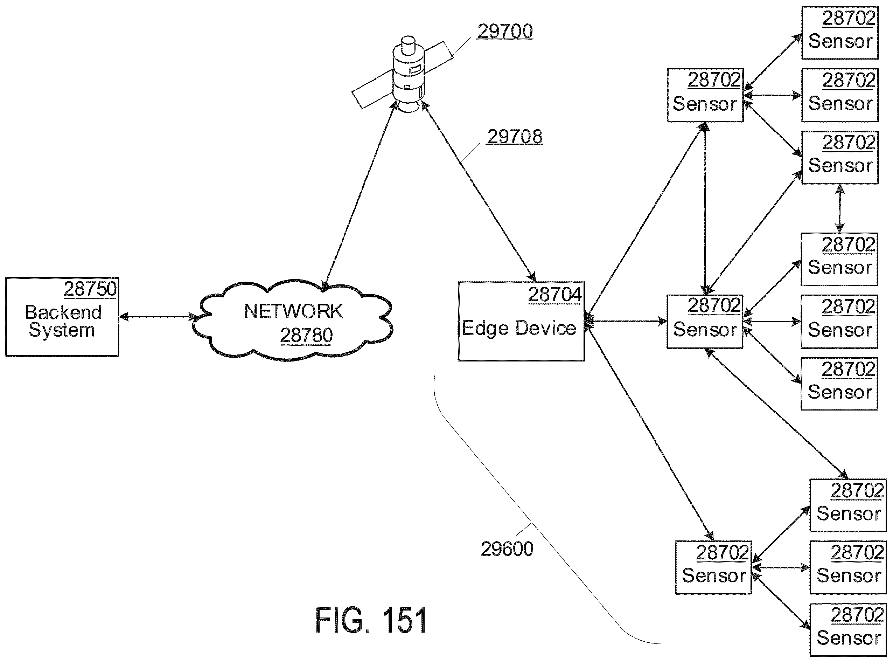

FIG. 297 illustrates an example configuration of a sensor kit 29700 according to some embodiments of the present disclosure. In the illustrated example, the sensor kit 29700 is configured to communicate with a communication network 28780 via an uplink 29708 to a satellite 29710. In embodiments, the sensor kit 29700 of FIG. 151 is configured for use in industrial setting 28720 located in remote locations, where cellular coverage is unreliable or non-existent. In embodiments, the sensor kit 29700 may be installed in natural resource extraction, natural resource transportation systems, power generation facilities, and the like. For example, the sensor kit 29700 may be deployed in an oil or natural gas fields, off-shore oil rigs, mines, oil or gas pipelines, solar fields, wind farms, hydroelectric power stations, and the like.

In the example of FIG. 151, the sensor kit 29700 includes an edge device 28704 and a set of sensors 28702. The sensors 28702 may include various types of sensors 28702, which may vary depending on the industrial setting 28720. In the illustrated example, the sensors 28702 communicate with the edge device 28704 via a mesh network. In these embodiments, the sensors 28702 may communicate sensor data to proximate sensors 28702, so as to propagate the sensor data to the edge device 28704 located at the remote/peripheral areas of the industrial setting 28720 to the edge device 28704. While a mesh network is shown, the sensor kits 29700 of FIG. 151 may include alternative network topologies, such as a hierarchal topology (e.g., some or all of the sensors 28702 communicate with the edge device 28704 via respective collection devices) or a star topology (e.g., sensors 28702 communicate to the edge device directly).

In the embodiments of FIG. 151, the edge device 28704 includes a satellite terminal with a directional antenna that communicates with a satellite. The satellite terminal may be pre-configured to communicate with a geosynchronous or low Earth orbit satellites. The edge device 28704 may receive sensor data from the sensor kit network established by the sensor kit 29700. The edge device 28704 may then transmit the sensor data to the backend system 28750 via the satellite 29710.

In embodiments, the configurations of the sensor kit 29700 are suited for industrial setting 28720 covering a remote area where external power sources are not abundant. In embodiments, the sensor kit 29700 may include external power sources, such as batteries, rechargeable batteries, generators, and/or solar panels. In these embodiments, the external power sources may be deployed to power the sensors 28702, the edge device 28704, and any other devices in the sensor kit 29700.

In embodiments, the configurations of the sensor kit 29700 are suited for outdoor industrial setting 28720. In embodiments, the sensors 28702, the edge device 28704, and other devices of the sensor kit 28700 (e.g., collection devices) may be configured with weatherproof housings. In these embodiments, the sensor kit 29700 may be deployed in an outdoor setting.

In embodiments, the edge device 28704 may be configured to perform one or more AI-related tasks prior to transmission via the satellite uplink. In some of these embodiments, the edge device 28704 may be configured to determine whether there are likely no issues relating to any of the components and/or the industrial setting 28720 based on the sensor data and one or more machine-learned models. In embodiments, the edge device 28704 may receive the sensor data from the various sensors and may generate one or more feature vectors based thereon. The feature vectors may include sensor data from a single sensor 28702, a subset of sensors 28702, or all of the sensors 28702 of the sensor kit 29700. In scenarios where a single sensor or a subset of sensors 28702 are included in the feature vector, the machine-learned model may be trained to identify one or more issues relating to an industrial component or the industrial setting 28720, but may not be sufficient to fully deem the entire setting as likely safe/free from issues. Additionally or alternatively, the feature vectors may correspond to a single snapshot in time (e.g., all sensor data in the feature vector corresponds to the same sampling event) or over a period of time (sensor data samples from a most recent sampling event and sensor data samples from previous sampling events). In embodiments where the feature vectors define sensor data from a single snapshot, the machine-learned models may be trained to identify potential issues without any temporal context. In embodiments where the feature vectors define sensor data over a period of time, the machine-learned models may be trained to identify potential issues with the context of what the sensor(s) 28702 was/were reporting previously. In these embodiments, the edge device 28704 may maintain a cache of sensor data that is sampled over a predetermined time (e.g., previous hour, previous day, previous N days), such that the cache is cleared out in a first-in-first-out manner. In these embodiments, the edge device 28704 may retrieve the previous sensor data samples from the cache to use to generate feature vectors that have data samples spanning a period of time.

In embodiments, the edge device 28704 may feed the one or more feature vectors into one or more respective machine-learned models. A respective model may output a prediction or classification relating to an industrial component and/or the industrial setting 28720, and a confidence score relating to the prediction or classification. In some embodiments, the edge device 28704 may make determinations relating to the manner by which sensor data is transmitted to the backend system 28750 and/or stored at the edge device. For instance, in some embodiments, the edge device 28704 may compress sensor data based on the prediction or classification. In some of these embodiments, the edge device 28704 may compress sensor data when there are no likely issues across the entire industrial setting 28720 and individual components of the industrial setting 28720. For example, if the machine-learned models predict that there are likely no issues and classify that there are currently no issues with a high degree of confidence (e.g., the confidence score is greater than .98), the edge device 28704 may compress the sensor data. Alternatively, in the scenario where the machine-learned models predict that there are likely no issues and classify that there are currently no issues with a high degree of confidence, the edge device 28704 may forego transmission but may store the sensor data at the edge device 28704 for a predefined period of time (e.g., one year). In scenarios where a machine-learned model predicts a potential issue or classifies a current issue, the edge device 28704 may transmit the sensor data without compressing the sensor data or using a lossless compression codec. In this way, the amount of bandwidth that is transmitted via the satellite uplink may be reduced, as the majority of the time the sensor data will be compressed or not transmitted.

In embodiments, the edge device 28704 may apply one or more rules to determine whether a triggering condition exists. In embodiments, the one or more rules may be tailored to identify potentially dangerous and/or emergency situations. In these embodiments, the edge device 28704 may trigger one or more notifications or alarms when a triggering condition exists. Additionally or alternatively, the edge device 28704 may transmit the sensor data without any compression when a triggering condition exists.

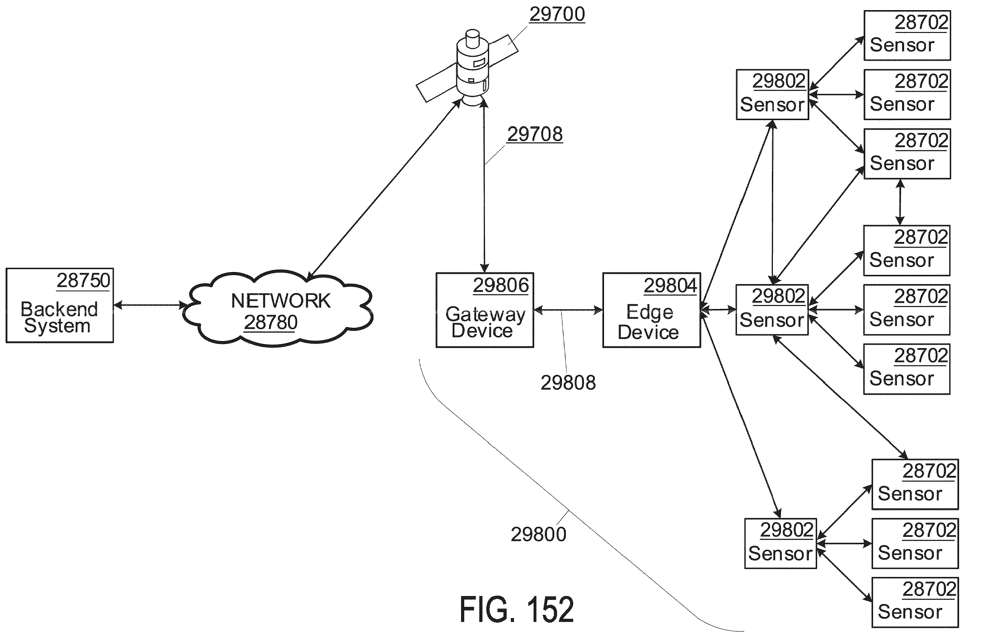

FIG. 298 illustrates an example configuration of a sensor kit 29800 according to some embodiments of the present disclosure. In the illustrated example, the sensor kit 29800 is configured to include a gateway device 29806 that communicates with a communication network 28780 via an uplink 29708 to a satellite 29710. In embodiments, the sensor kit 29800 of FIG. 152 is configured for use in industrial setting 28720 located in remote locations, where cellular coverage is unreliable or non-existent, and where the edge device 28704 is located in a location where physical transmission to a satellite is unreliable or impossible. In embodiments, the sensor kit 29700 may be installed in underground or underwater facilities, or in facilities having very thick walls. For example, the sensor kit 29700 may be deployed in underground mines, underwater oil or gas pipelines, underwater hydroelectric power stations, and the like.

In the example of FIG. 152, the sensor kit 29800 includes an edge device 28704, a set of sensors 28702, and a gateway device 29806. In embodiments, the gateway device 29806 is a communication device that includes a satellite terminal with a directional antenna that communicates with a satellite. The satellite terminal may be pre-configured to communicate with a geosynchronous or low Earth orbit satellites. In embodiments, the gateway device 29806 may communicate with the edge device 28704 via a wired communication link 29808 (e.g., Ethernet). The edge device 28704 may receive sensor data from the sensor kit network established by the sensor kit 29800. The edge device 28704 may then transmit the sensor data to the gateway device 29806 via the wired communication link 29808. The gateway device 29806 may then communicate the sensor data to the backend system 28750 via the satellite uplink 29708.

The sensors 28702 may include various types of sensors 28702, which may vary depending on the industrial setting 28720. In the illustrated example, the sensors 28702 communicate with the edge device 28704 via a mesh network. In these embodiments, the sensors 28702 may communicate sensor data to proximate sensors 28702, so as to propagate the sensor data to the edge device 28704 located at the remote/peripheral areas of the industrial setting 28720 to the edge device 28704. While a mesh network is shown, the sensor kits 29800 of FIG. 152 may include alternative network topologies, such as a hierarchal topology (e.g., some or all of the sensors 28702 communicate with the edge device 28704 via respective collection devices) or a star topology (e.g., sensors 28702 communicate to the edge device directly).

In embodiments, the configurations of the server kit 29800 are suited for industrial setting 28720 covering a remote area where external power sources are not abundant. In embodiments, the sensor kit 29800 may include external power sources, such as batteries, rechargeable batteries, generators, and/or solar panels. In these embodiments, the external power sources may be deployed to power the sensors 28702, the edge device 28704, and any other devices in the sensor kit 29800.

In embodiments, the configurations of the server kit 29800 are suited for underground or underwater industrial setting 28720. In embodiments, the sensors 28702, the edge device 28704, and other devices of the sensor kit 28700 (e.g., collection devices) may be configured with waterproof housings or otherwise airtight housings (to prevent dust from entering the edge device 28704 and/or sensor devices 28702). Furthermore, as the gateway device 29808 is likely to be situated outdoors, the gateway device 29808 may include a weatherproof housing.

In embodiments, the edge device 28704 may be configured to perform one or more AI-related tasks prior to transmission via the satellite uplink. In some of these embodiments, the edge device 28704 may be configured to determine whether there are likely no issues relating to any of the components and/or the industrial setting 28720 based on the sensor data and one or more machine-learned models. In embodiments, the edge device 28704 may receive the sensor data from the various sensors and may generate one or more feature vectors based thereon. The feature vectors may include sensor data from a single sensor 28702, a subset of sensors 28702, or all of the sensors 28702 of the sensor kit 29800. In scenarios where a single sensor or a subset of sensors 28702 are included in the feature vector, the machine-learned model may be trained to identify one or more issues relating to an industrial component or the industrial setting 28720, but may not be sufficient to fully deem the entire setting as likely safe/free from issues. Additionally or alternatively, the feature vectors may correspond to a single snapshot in time (e.g., all sensor data in the feature vector corresponds to the same sampling event) or over a period of time (sensor data samples from a most recent sampling event and sensor data samples from previous sampling events). In embodiments where the feature vectors define sensor data from a single snapshot, the machine-learned models may be trained to identify potential issues without any temporal context. In embodiments where the feature vectors define sensor data over a period of time, the machine-learned models may be trained to identify potential issues with the context of what the sensor(s) 28702 was/were reporting previously. In these embodiments, the edge device 28704 may maintain a cache of sensor data that is sampled over a predetermined time (e.g., previous hour, previous day, previous N days), such that the cache is cleared out in a first-in-first-out manner. In these embodiments, the edge device 28704 may retrieve the previous sensor data samples from the cache to use to generate feature vectors that have data samples spanning a period of time.

In embodiments, the edge device 28704 may feed the one or more feature vectors into one or more respective machine-learned models. A respective model may output a prediction or classification relating to an industrial component and/or the industrial setting 28720, and a confidence score relating to the prediction or classification. In some embodiments, the edge device 28704 may make determinations relating to the manner by which sensor data is transmitted to the backend system 28750 and/or stored at the edge device. For instance, in some embodiments, the edge device 28704 may compress sensor data based on the prediction or classification. In some of these embodiments, the edge device 28704 may compress sensor data when there are no likely issues across the entire industrial setting 28720 and individual components of the industrial setting 28720. For example, if the machine-learned models predict that there are likely no issues and classify that there are currently no issues with a high degree of confidence (e.g., a confidence score is greater than .98), the edge device 28704 may compress the sensor data. Alternatively, in the scenario where the machine-learned models predict that there are likely no issues and classify that there are currently no issues with a high degree of confidence, the edge device 28704 may forego transmission but may store the sensor data at the edge device 28704 for a predefined period of time (e.g., one year). In scenarios where a machine-learned model predicts a potential issue or classifies a current issue, the edge device 28704 may transmit the sensor data without compressing the sensor data or using a lossless compression codec. In this way, the amount of bandwidth that is transmitted via the satellite uplink may be reduced, as the majority of the time the sensor data will be compressed or not transmitted.

In embodiments, the edge device 28704 may apply one or more rules to determine whether a triggering condition exists. In embodiments, the one or more rules may be tailored to identify potentially dangerous and/or emergency situations. In these embodiments, the edge device 28704 may trigger one or more notifications or alarms when a triggering condition exists. Additionally or alternatively, the edge device 28704 may transmit the sensor data (via the gateway device 29806) without any compression when a triggering condition exists.

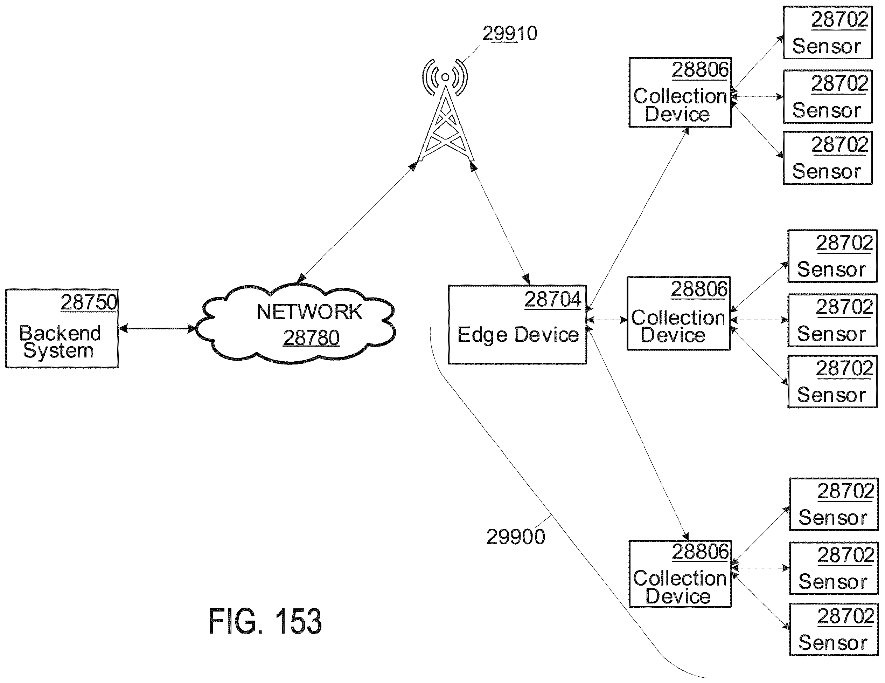

Figure 153 illustrates an example configuration of a sensor kit 29900 according to some embodiments of the present disclosure. In the example of figure 153, the sensor kit 29900 includes an edge device 28704, a set of sensors, and a set of collection devices. In embodiments, the configurations of the sensor kit 29900 are suited for industrial setting 28720 covering a large area and where power sources are abundant; but where the industrial operator does not wish to connect the sensor kit 29900 to the private network of the industrial setting 28720. In embodiments, the edge device 28704 includes a cellular communication device (e.g., a 4G LTE chipset or 5G LTE chipset) with a transceiver that communicates with a cellular tower 29910. The cellular communication may be pre-configured to communicate with a cellular data provider. For example, in embodiments, the edge device 28704 may include a SIM card that is registered with a cellular provider having a cellular tower 29910 that is proximate to the industrial setting 28720. The edge device 28704 may receive sensor data from the sensor kit network established by the sensor kit 29900. The edge device 28704 may process the sensor data and then transmit the sensor data to the backend system 28750 via the cellular tower 29910.

The sensors 28702 may include various types of sensors 28702, which may vary depending on the industrial setting 28720. In the illustrated example, the sensors 28702 communicate with the edge device 28704 via a hierarchical network. In these embodiments, the sensors 28702 may communicate sensor data to collection devices 206, which, in turn, may communicate the sensor data to edge device 28704 via a wired or wireless communication link. The hierarchical network may be deployed where the area being monitored is rather larger (e.g., over 40,000 sq. ft.) and power supplies are abundant, such as in a factory, a power plant, a food inspection facility, an indoor grow facility, and the like. While a hierarchal network is shown, the sensor kits 29900 of Figure 153 may include alternative network topologies, such as a mesh topology or a star topology (e.g., sensors 28702 communicate to the edge device directly).

In embodiments, the edge device 28704 may be configured to perform one or more AI-related tasks prior to transmission via the satellite uplink. In some of these embodiments, the edge device 28704 may be configured to determine whether there are likely no issues relating to any of the components and/or the industrial setting 28720 based on the sensor data and one or more machine-learned models. In embodiments, the edge device 28704 may receive the sensor data from the various sensors and may generate one or more feature vectors based thereon. The feature vectors may include sensor data from a single sensor 28702, a subset of sensors 28702, or all of the sensors 28702 of the sensor kit 29900. In scenarios where a single sensor or a subset of sensors 28702 are included in the feature vector, the machine-learned model may be trained to identify one or more issues relating to an industrial component or the industrial setting 28720, but may not be sufficient to fully deem the entire setting as likely safe/free from issues. Additionally or alternatively, the feature vectors may correspond to a single snapshot in time (e.g., all sensor data in the feature vector corresponds to the same sampling event) or over a period of time (sensor data samples from a most recent sampling event and sensor data samples from previous sampling events). In embodiments where the feature vectors define sensor data from a single snap shot, the machine-learned models may be trained to identify potential issues without any temporal context. In embodiments where the feature vectors define sensor data over a period of time, the machine-learned models may be trained to identify potential issues with the context of what the sensor(s) 28702 was/were reporting previously. In these embodiments, the edge device 28704 may maintain a cache of sensor data that is sampled over a predetermined time (e.g., previous hour, previous day, previous N days), such that the cache is cleared out in a first-in-first-out manner. In these embodiments, the edge device 28704 may retrieve the previous sensor data samples from the cache to use to generate feature vectors that have data samples spanning a period of time.

In embodiments, the edge device 28704 may feed the one or more feature vectors into one or more respective machine-learned models. A respective model may output a prediction or classification relating to an industrial component and/or the industrial setting 28720, and a confidence score relating to the prediction or classification. In some embodiments, the edge device 28704 may make determinations relating to the manner by which sensor data is transmitted to the backend system 28750 and/or stored at the edge device. For instance, in some embodiments, the edge device 28704 may compress sensor data based on the prediction or classification. In some of these embodiments, the edge device 28704 may compress sensor data when there are no likely issues across the entire industrial setting 28720 and individual components of the industrial setting 28720. For example, if the machine-learned models predict that there are likely no issues and classify that there are currently no issues with a high degree of confidence (e.g., a confidence score is greater than .98), the edge device 28704 may compress the sensor data. Alternatively, in the scenario where the machine-learned models predict that there are likely no issues and classify that there are currently no issues with a high degree of confidence, the edge device 28704 may forego transmission but may store the sensor data at the edge device 28704 for a predefined period of time (e.g., one year). In scenarios where a machine-learned model predicts a potential issue or classifies a current issue, the edge device 28704 may transmit the sensor data without compressing the sensor data or using a lossless compression codec. In this way, the amount of bandwidth that is transmitted via the cellular tower may be reduced, as the majority of the time the sensor data will be compressed or not transmitted.

In embodiments, the edge device 28704 may apply one or more rules to determine whether a triggering condition exists. In embodiments, the one or more rules may be tailored to identify potentially dangerous and/or emergency situations. In these embodiments, the edge device 28704 may trigger one or more notifications or alarms when a triggering condition exists. Additionally or alternatively, the edge device 28704 may transmit the sensor data without any compression when a triggering condition exists.

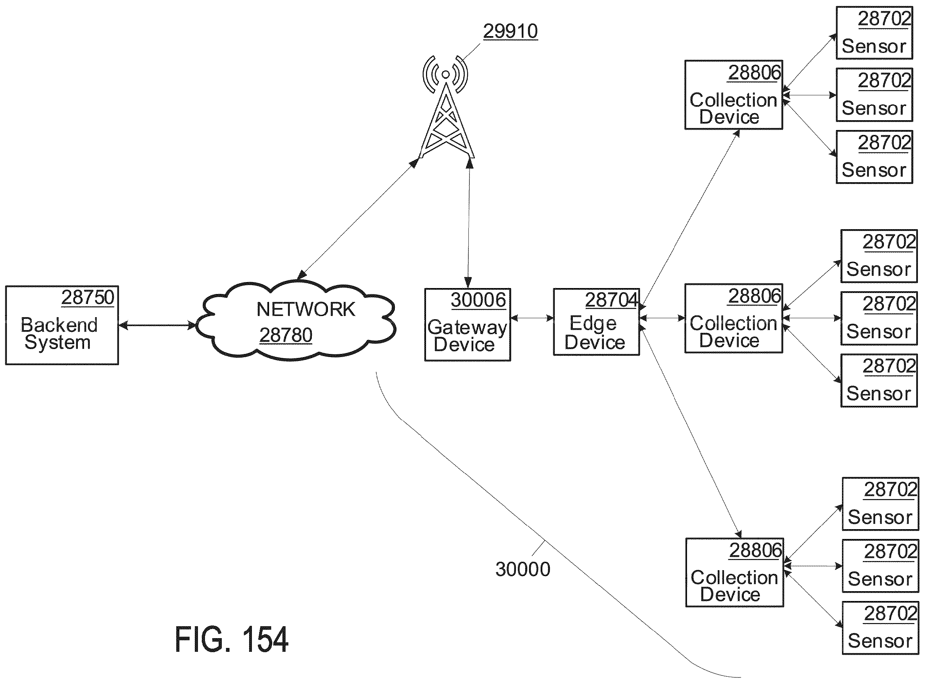

FIG. 154 illustrates an example configuration of a sensor kit 30000 according to some embodiments of the present disclosure. In the example of FIG. 154, the sensor kit 30000 includes an edge device 28704, a set of sensors 28702, a set of collection devices 206, and a gateway device 30006. In embodiments, the configurations of the sensor kit 30000 are suited for industrial setting 28720 covering a large area and where power sources are abundant; but where the industrial operator does not wish to connect the sensor kit 30000 to the private network of the industrial setting 28720 and the walls of the industrial setting 28720 make wireless communication (e.g., cellular communication) unreliable or impossible. In embodiments, the gateway device 30006 is a cellular network gateway device that includes a cellular communication device (e.g., 4G, 5G chipset) with a transceiver that communicates with a cellular tower 29910. The cellular communication may be pre-configured to communicate with a cellular data provider. For example, in embodiments, the gateway device may include a SIM card that is registered with a cellular provider having a tower 29910 that is proximate to the industrial setting 28720. In embodiments, the gateway device 30006 may communicate with the edge device 28704 via a wired communication link 30008 (e.g., Ethernet). The edge device 28704 may receive sensor data from the sensor kit network established by the sensor kit 30000. The edge device 28704 may then transmit the sensor data to the gateway device 30006 via the wired communication link 30008. The gateway device 30006 may then communicate the sensor data to the backend system 28750 via the cellular tower 29910.

The sensors 28702 may include various types of sensors 28702, which may vary depending on the industrial setting 28720. In the illustrated example, the sensors 28702 communicate with the edge device 28704 via a hierarchical network. In these embodiments, the sensors 28702 may communicate sensor data to collection devices 206, which, in turn, may communicate the sensor data to edge device 28704 via a wired or wireless communication link. The hierarchical network may be deployed where the area being monitored is rather larger (e.g., over 40,000 sq. ft.) and power supplies are abundant, such as in a factory, a power plant, a food inspection facility, an indoor grow facility, and the like. While a hierarchal network is shown, the sensor kits 30000 of FIG. 154 may include alternative network topologies, such as a mesh topology or a star topology (e.g., sensors 28702 communicate to the edge device directly).

In embodiments, the edge device 28704 may be configured to perform one or more AI-related tasks prior to transmission via the satellite uplink. In some of these embodiments, the edge device 28704 may be configured to determine whether there are likely no issues relating to any of the components and/or the industrial setting 28720 based on the sensor data and one or more machine-learned models. In embodiments, the edge device 28704 may receive the sensor data from the various sensors and may generate one or more feature vectors based thereon. The feature vectors may include sensor data from a single sensor 28702, a subset of sensors 28702, or all of the sensors 28702 of the sensor kit 30000. In scenarios where a single sensor or a subset of sensors 28702 are included in the feature vector, the machine-learned model may be trained to identify one or more issues relating to an industrial component or the industrial setting 28720, but may not be sufficient to fully deem the entire setting as likely safe/free from issues. Additionally or alternatively, the feature vectors may correspond to a single snapshot in time (e.g., all sensor data in the feature vector corresponds to the same sampling event) or over a period of time (sensor data samples from a most recent sampling event and sensor data samples from previous sampling events). In embodiments where the feature vectors define sensor data from a single snapshot, the machine-learned models may be trained to identify potential issues without any temporal context. In embodiments where the feature vectors define sensor data over a period of time, the machine-learned models may be trained to identify potential issues with the context of what the sensor(s) 28702 was/were reporting previously. In these embodiments, the edge device 28704 may maintain a cache of sensor data that is sampled over a predetermined time (e.g., previous hour, previous day, previous N days), such that the cache is cleared out in a first-in-first-out manner. In these embodiments, the edge device 28704 may retrieve the previous sensor data samples from the cache to use to generate feature vectors that have data samples spanning a period of time.

In embodiments, the edge device 28704 may feed the one or more feature vectors into one or more respective machine-learned models. A respective model may output a prediction or classification relating to an industrial component and/or the industrial setting 28720, and a confidence score relating to the prediction or classification. In some embodiments, the edge device 28704 may make determinations relating to the manner by which sensor data is transmitted to the backend system 28750 and/or stored at the edge device. For instance, in some embodiments, the edge device 28704 may compress sensor data based on the prediction or classification. In some of these embodiments, the edge device 28704 may compress sensor data when there are no likely issues across the entire industrial setting 28720 and individual components of the industrial setting 28720. For example, if the machine-learned models predict that there are likely no issues and classify that there are currently no issues with a high degree of confidence (e.g., the confidence score is greater than .98), the edge device 28704 may compress the sensor data. Alternatively, in the scenario where the machine-learned models predict that there are likely no issues and classify that there are currently no issues with a high degree of confidence, the edge device 28704 may forego transmission but may store the sensor data at the edge device 28704 for a predefined period of time (e.g., one year). In scenarios where a machine-learned model predicts a potential issue or classifies a current issue, the edge device 28704 may transmit the sensor data without compressing the sensor data or using a lossless compression codec. In this way, the amount of bandwidth that is transmitted via the cellular tower may be reduced, as the majority of the time the sensor data will be compressed or not transmitted.

In embodiments, the edge device 28704 may apply one or more rules to determine whether a triggering condition exists. In embodiments, the one or more rules may be tailored to identify potentially dangerous and/or emergency situations. In these embodiments, the edge device 28704 may trigger one or more notifications or alarms when a triggering condition exists. Additionally or alternatively, the edge device 28704 may transmit the sensor data without any compression when a triggering condition exists.

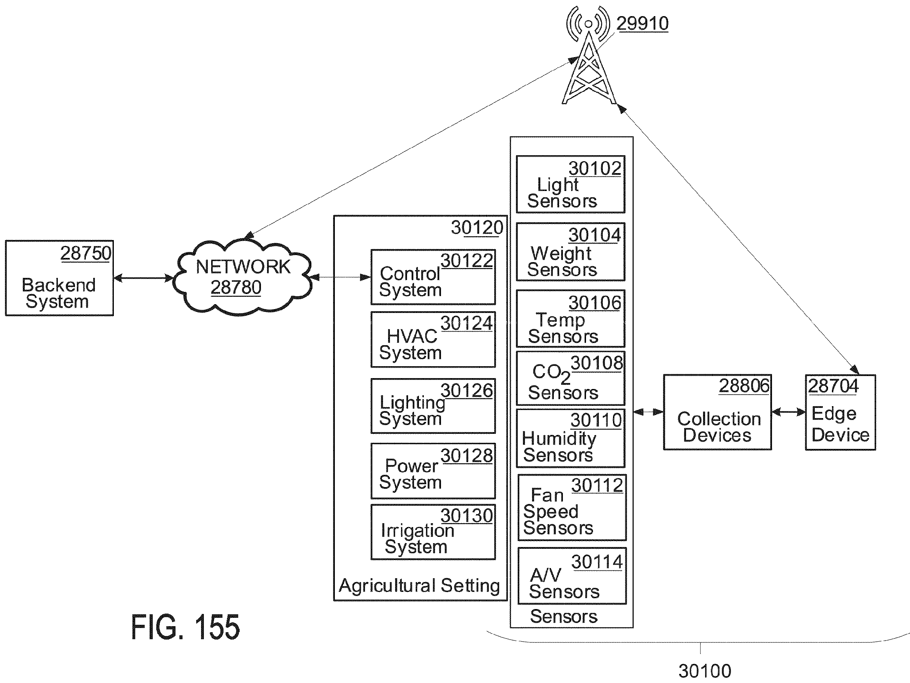

FIG. 155 illustrates an example configuration of a sensor kit 30100 for installation in an agricultural setting 30120 according to some embodiments of the present disclosure. In the example of FIG. 155, the sensor kit 30100 is configured for installation in an indoor agricultural setting 30120 that may include, but is not limited to, a control system 30122, an HVAC system 30124, a lighting system 30126, a power system 30128, and/or an irrigation system 30130. In this example, various features and components of the agricultural setting include components that are monitored by a set of sensors 28702. In embodiments, the sensors 28702 capture instances of sensor data and provide the respective instances of sensor data to an edge device 28704. In the example embodiments of FIG. 155 the sensor kit 30100 includes a set of collection devices 206 that route sensor data from the sensors 28702 to the edge device 28704. Sensor kits 30100 for deployment in agricultural settings may have different sensor kit network topologies as well. For instance, in facilities not having more than two or three rooms being monitored, the sensor kit network may be a mesh or star network, depending on the distances between the edge device 28704 and the furthest potential sensor location. For example, if the distance between the edge device 28704 and the furthest potential sensor location is greater than 150 meters, then the sensor kit network may be configured as a mesh network. In the embodiments of FIG. 155, the edge device 28704 transmits the sensor data to the backend system 28750 directly. In these embodiments, the edge device 28704 includes a cellular communication device that communicates with a cellular tower 29910 of a preset cellular provider via a preconfigured cellular connection to a cellular tower 29910. In other embodiments of the disclosure, the edge device 28704 transmits the sensor data to the backend system 28750 via a gateway device (e.g., gateway device 30006) that includes a cellular communication device that communicates with a cellular tower 29910 of a preset cellular provider.

In embodiments, a sensor kit 30100 may include any suitable combination of light sensors 30102, weight sensors 30104, temperature sensors 30106, CO2 sensors 30108, humidity sensors 30110, fan speed sensors 30112, and/or audio/visual (AV) sensors 30114 (e.g., cameras). Sensor kits 30100 may be arranged with additional or alternative sensors 28702. In embodiments, the sensor data collected by the edge device 28704 may include ambient light measurements indicating an amount of ambient light detected in the area of a light sensor 30102. In embodiments, the sensor data collected by the edge device 28704 may include a weight or mass measurements indicating a weight or mass of an object (e.g., a pot or tray containing one or more plants) that is resting upon a weight sensor 30104. In embodiments, the sensor data collected by the edge device 28704 may include temperature measurements indicating an ambient temperature in the vicinity of a temperature sensor 30106. In embodiments, the sensor data collected by the edge device 28704 may include humidity measurements indicating an ambient humidity in the vicinity of a humidity sensor 30110 or moisture measurements indicating a relative amount of moisture in a medium (e.g., soil) monitored by a humidity sensor 30110. In embodiments, the sensor data collected by the edge device 28704 may include $CO_2$ measurements indicating ambient levels of $CO_2$ in the vicinity of a $CO_2$ sensor 30108. In embodiments, the sensor data collected by the edge device 28704 may include temperature measurements indicating an ambient temperature in the vicinity of a temperature sensor 30106. In embodiments, the sensor data collected by the edge device 28704 may include fan speed measurements indicating a measured speed of a fan (e.g., a fan of an HVAC system 30124) as measured by a fan speed sensor 30112. In embodiments, the sensor data collected by the edge device 28704 may include video signals captured by an AV sensor 30116. The sensor data captured by sensors 28702 and collected by the edge device 28704 may include additional or alternative types of sensor data without departing from the scope of the disclosure.

In embodiments, the edge device 28704 is configured to perform one or more edge operations on the sensor data. For example, the edge device 28704 may pre-process the received sensor data. In embodiments, the edge device 28704 may predict or classify potential issues with one or more components of the HVAC system 30124, lighting system 30126, power system 30128, the irrigation system 30130; the plants growing in the agricultural facility; and/or the facility itself. In embodiments, the edge device 28704 may analyze the sensor data with respect to a set of rules that define triggering conditions. In these embodiments, the edge device 28704 may trigger alarms or notifications in response to a triggering condition being met. In embodiments, the edge device 28704 may encode, compress, and/or encrypt the sensor data, prior to transmission to the backend system 28750. In some of these embodiments, the edge device 28704 may selectively compress the sensor data based on predictions or classifications made by the edge device 28704 and/or upon one or more triggering conditions being met.

In embodiments, the edge device 28704 may be configured to perform one or more AI-related tasks prior to transmission via the satellite uplink. In some of these embodiments, the edge device 28704 may be configured to determine whether there are likely no issues relating to any of the components and/or the industrial setting 28720 based on the sensor data and one or more machine-learned models. In embodiments, the edge device 28704 may receive the sensor data from the various sensors and may generate one or more feature vectors based thereon. The feature vectors may include sensor data from a single sensor 28702, a subset of sensors 28702, or all of the sensors 28702 of the sensor kit 29900. In scenarios where a single sensor or a subset of sensors 28702 are included in the feature vector, the machine-learned model may be trained to identify one or more issues relating to an industrial component or the industrial setting 28720, but may not be sufficient to fully deem the entire setting as likely safe/free from issues. Additionally or alternatively, the feature vectors may correspond to a single snapshot in time (e.g., all sensor data in the feature vector corresponds to the same sampling event) or over a period of time (sensor data samples from a most recent sampling event and sensor data samples from previous sampling events). In embodiments where the feature vectors define sensor data from a single snapshot, the machine-learned models may be trained to identify potential issues without any temporal context. In embodiments where the feature vectors define sensor data over a period of time, the machine-learned models may be trained to identify potential issues with the context of what the sensor(s) 28702 was/were reporting previously. In these embodiments, the edge device 28704 may maintain a cache of sensor data that is sampled over a predetermined time (e.g., previous hour, previous day, previous N days), such that the cache is cleared out in a first-in-first-out manner. In these embodiments, the edge device 28704 may retrieve the previous sensor data samples from the cache to use to generate feature vectors that have data samples spanning a period of time.

In embodiments, the edge device 28704 may feed the one or more feature vectors into one or more respective machine-learned models. A respective model may output a prediction or classification relating to an industrial component and/or the industrial setting 28720, and a confidence score relating to the prediction or classification. In some embodiments, the edge device 28704 may make determinations relating to the manner by which sensor data is transmitted to the backend system 28750 and/or stored at the edge device. For instance, in some embodiments, the edge device 28704 may compress sensor data based on the prediction or classification. In some of these embodiments, the edge device 28704 may compress sensor data when there are no likely issues across the entire industrial setting 28720 and individual components of the industrial setting 28720. For example, if the machine-learned models predict that there are likely no issues and classify that there are currently no issues with a high degree of confidence (e.g., the confidence score is greater than .98), the edge device 28704 may compress the sensor data. Alternatively, in the scenario where the machine-learned models predict that there are likely no issues and classify that there are currently no issues with a high degree of confidence, the edge device 28704 may forego transmission but may store the sensor data at the edge device 28704 for a predefined period of time (e.g., one year). In scenarios where a machine-learned model predicts a potential issue or classifies a current issue, the edge device 28704 may transmit the sensor data without compressing the sensor data or using a lossless compression codec. In this way, the amount of bandwidth that is transmitted via the cellular tower may be reduced, as the majority of the time the sensor data will be compressed or not transmitted.

In embodiments, the edge device 28704 may apply one or more rules to the sensor data to determine whether a triggering condition exists. In embodiments, the one or more rules may be tailored to identify potentially dangerous and/or emergency situations. In these embodiments, the edge device 28704 may trigger one or more notifications or alarms when a triggering condition exists. Additionally or alternatively, the edge device 28704 may transmit the sensor data without any compression when a triggering condition exists. In some embodiments, the edge device 28704 may selectively compress and/or transmit the sensor data based on the application of the one or more rules to the sensor data.

In embodiments, the backend system 28750 may perform one or more backend operations based on received sensor data. In embodiments, the backend system 28750 may decode/decompress/decrypt the sensor data received from respective sensor kits 30100. In embodiments, the backend system 28750 may preprocess received sensor data. In embodiments, the backend system 28750 may preprocess sensor data received from a respective sensor kit 30100. For example, the backend system 28750 may filter, dedupe, and/or structure the sensor data. In embodiments, the backend system 28750 may perform one or more AI-related tasks using the sensor data. In some of these embodiments, the backend system 28750 may extract features from the sensor data, which may be used to predict on classify certain conditions or events relating to the agricultural setting. For example, the backend system 28750 may deploy models used to predict yields of a crop based on weight measurements, temperature measurements, $CO_2$ measurements, light measurements, and/or other extracted features. In another example, the backend system 28750 may deploy models used to predict or classify mold-inducing states in a room or area of the agricultural facility based on temperature measurements, humidity measurements, video signals or images, and/or other extracted features. In embodiments, the backend system 28750 may perform one or more analytics tasks on the sensor data and may display the results to a human user via a dashboard. In some embodiments, the backend system 28750 may receive control commands from a human user via the dashboard. For example, a human resource with sufficient login credentials may control an HVAC system 30124, a lighting system 30126, a power system 30128, and/or an irrigation system 30130 of the industrial setting 28720. In some of these embodiments, the backend system 28750 may telemetrically monitor the actions of the human user, and may train one or more machine-learned models (e.g., neural networks) on actions to take in response to displaying the analytics results to the human user. In other embodiments, the backend system 28750 may execute one or more workflows associated with the HVAC system 30124, the lighting system 30126, the power system 30128, and/or the irrigation system 30130, in order to control one or more of the systems of the agricultural setting 30120 based on a prediction or classification made by the backend system in response to the sensor data. In embodiments, the backend system 28750 provides one or more control commands to a control system 30122 of an agricultural setting 30120, which in turn may control the HVAC system 30124, the lighting system 30126, the power system 30128, and/or the irrigation system 30130 based on the received control commands. In embodiments, the backend system 28750 may provide or utilize an API to provide control commands to the agricultural setting 30120.

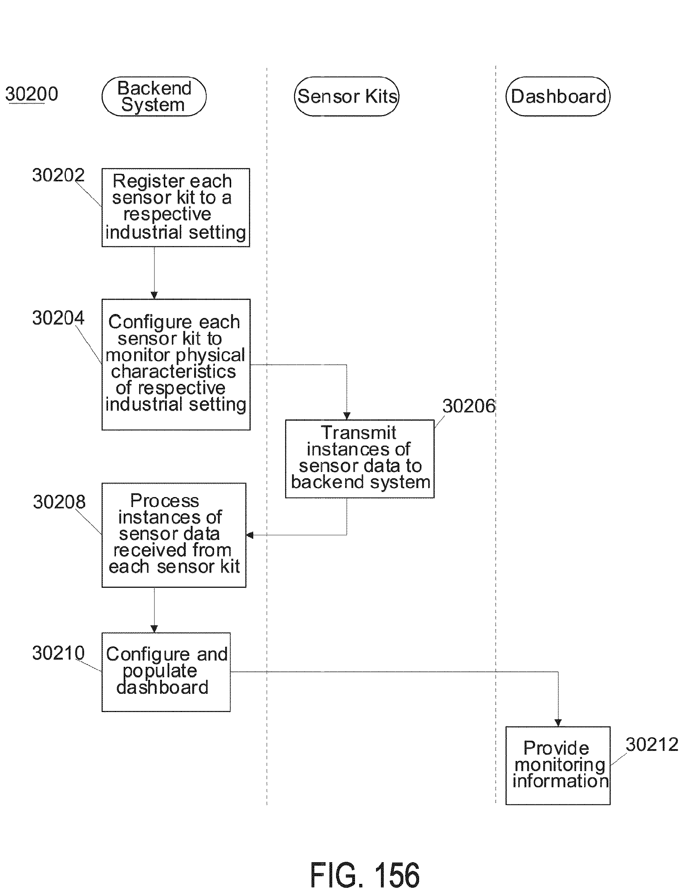

FIG. 156 illustrates an example set of operations of a method 30200 for monitoring industrial setting 28720 using an automatically configured backend system 28750. In embodiments, the method 30200 may be performed by the backend system 28750, the sensor kit 28700, and the dashboard module 532.

At 30202, the backend system 28750 registers the sensor kit 28700 to a respective industrial setting 28720. In some embodiments, the backend system 28750 registers a plurality of sensor kits 28700 and registers each sensor kit 28700 of the plurality of sensor kits 28700 to a respective industrial setting 28720. In embodiments, the backend system 28750 provides an interface for specifying a type of entity or industrial setting 28720 to be monitored. In some embodiments, a user may select a set of parameters for monitoring of the respective industrial setting 28720 of the sensor kit 28700. The backend system 28750 may automatically provision a set of services and capabilities of the backend system 28750 based on the selected parameters.

At 30204, the backend system 28750 configures the sensor kit 28700 to monitor physical characteristics of the respective industrial setting 28720 to which the sensor kit 28700 is registered. For example, when the respective industrial setting 28720 is a natural resource extraction setting, the backend system 28750 may configure one or more of infrared sensors, ground penetrating sensors, light sensors, humidity sensors, temperature sensors, chemical sensors, fan speed sensors, rotational speed sensors, weight sensors, and camera sensors to monitor and collect sensor data relating to metrics and parameters of the natural resource extraction setting and equipment used therein.

At 30206, the sensor kit 28700 transmits instances of sensor data to the backend system 28750. In some embodiments, the sensor kit 28700 transmits the instances of sensor data to the backend system 28750 via a gateway device. The gateway device may provide a virtual container for instances of the sensor data such that only a registered owner or operator of the respective industrial setting 28720 can access the sensor data via the backend system 28750.

At 30208, the backend system 28750 processes instances of sensor data received from the sensor kit 28700. In some embodiments, the backend system 28750 includes an analytics facility and/or a machine learning facility. The analytics facility and/or the machine learning facility may be configured based on the type of the industrial setting 28720 and may process the instances of sensor data received from the sensor kit 28700. In some embodiments, the backend system 28750 updates and/or configures a distributed ledger based on the processed instances of sensor data.

At 30210, the backend system 28750 configures and populates the dashboard. In embodiments, the backend system 28750 configures the dashboard to retrieve and display one or more of raw sensor data provided by the sensor kit, analytical data relating to the sensor data provided by the sensor kit 28700, predictions or classifications made by the backend system 28750 based on the sensor data, and the like. In some embodiments, the backend system 28750 configures alarm limits with respect to one or more sensor types and/or conditions based on the industrial setting 28720. The backend system 28750 may define which users receive a notification when an alarm is triggered. In embodiments, the backend system 28750 may subscribe to additional features of the backend system 28750 and/or an edge device 28704 based on the industrial setting 28720.

At 30212, the dashboard provides monitoring information to a human user. In embodiments, the dashboard provides monitoring information to the user by displaying the monitoring information on a device, e.g., a computer terminal, a smartphone, a monitor, or any other suitable device for displaying information. The monitoring information may be provided via a graphical user interface.

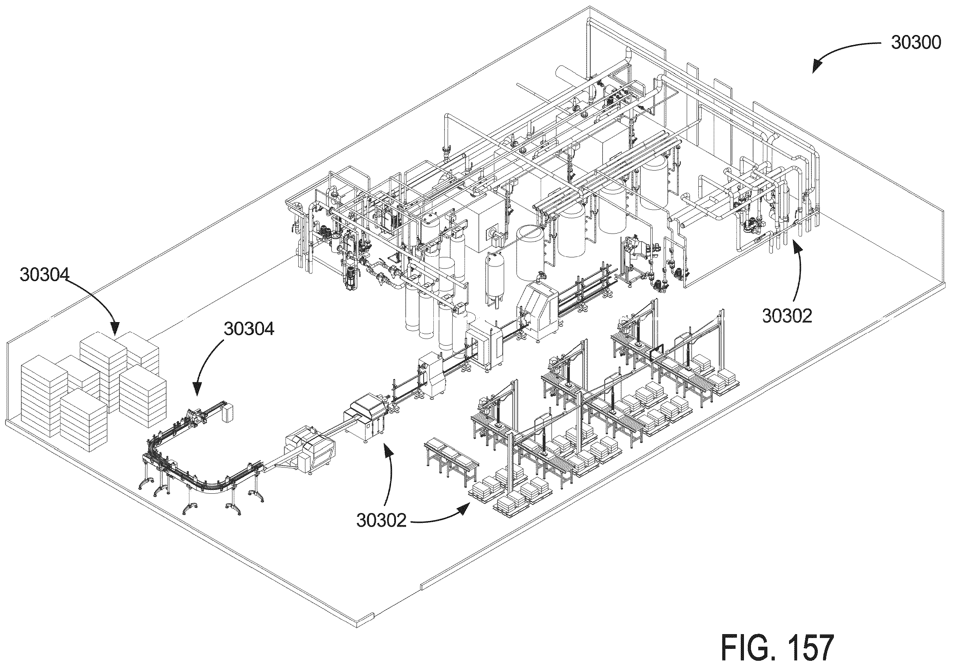

FIG. 157 illustrates an exemplary manufacturing facility 30300 according to some embodiments of the present disclosure. The manufacturing facility 30300 may include a plurality of industrial machines 30302 including, by way of example, conveyor belts, assembly machines, die machines, turbines, and power systems. The manufacturing facility 30300 may further include a plurality of products 30304. The manufacturing facility may have the sensor kit 28700 installed therein, the sensor kit 28700 including the plurality of sensors 28702 and the edge device 28704. By way of example, one or more of the sensors 28702 may be installed on some or all of the industrial machines 30302 and the products 30304.

FIG. 158 illustrates a surface portion of an exemplary underwater industrial facility 30400 according to some embodiments of the present disclosure. The underwater industrial facility 30400 may include a transportation and communication platform 30402, a storage platform 30404, and a pumping platform 30406. The underwater industrial facility 30400 may have the sensor kit 28700 installed therein, the sensor kit 28700 including the plurality of sensors 28702 and the edge device 28704. By way of example, one or more of the sensors 28702 may be installed on some or all of the transportation and communication platform 30402, the storage platform 30404, and the pumping platform 30406, and on individual components and machines thereof.

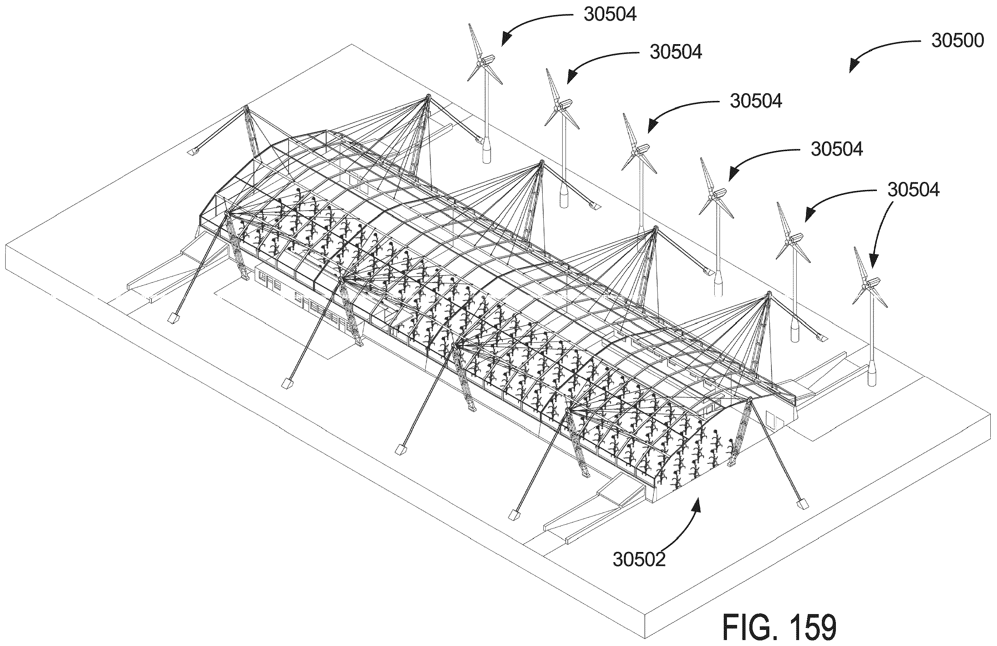

FIG. 159 illustrates an exemplary indoor agricultural facility 30500 according to some embodiments of the present disclosure. The indoor agricultural facility 30500 may include a greenhouse 30502 and a plurality of wind turbines 30504. The indoor agricultural facility 30500 may have the sensor kit 28700 installed therein, the sensor kit 28700 including the plurality of sensors 28702 and the edge device 28704. By way of example, one or more of the sensors 28702 may be installed on some or all components of the greenhouse 30504 and on some or all components of the wind turbines 30504.

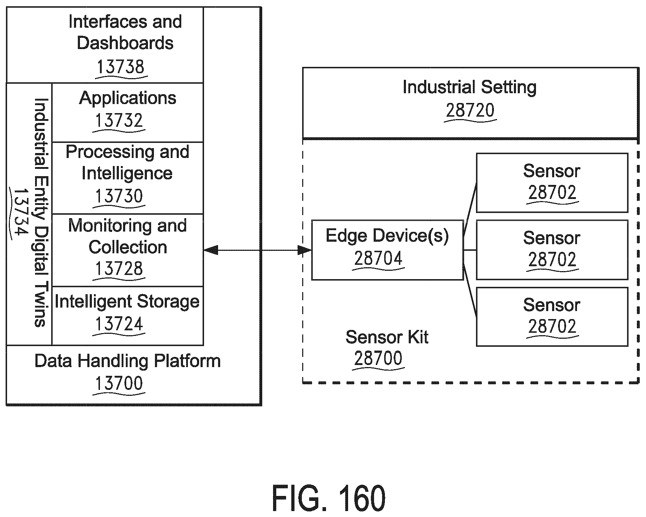

Referring to FIG. 160, in embodiments, the edge device 28704 may include, link or connect to, integrate with, or be integrated into the control system 13742 and/or the data handling platform 13700 for providing control for one or more industrial entities 13736, such as controlling a machine in a factory (such as a CNC machine, additive manufacturing machine, energy system (e.g., a generator or turbine), an assembly line, or the like), controlling a workflow (such as a production workflow, an inspection workflow, a data collection workflow, a maintenance workflow, a servicing workflow, or the like), or controlling sub-systems, systems, or operations of an entire factory or set of factories. In some embodiments, the edge device 28704 may link or connect to the control system 13742 via the network 28780. In some embodiments, the edge device 28704 may integrate with the control system 13742 via the processing device 29006. In some embodiments, the control system 13742 may integrate with the backend system 28750. Processing, computation and intelligence capabilities of the edge device 28704 may thus benefit from input from a set of control systems 13742 and may provide inputs to (including control signals for) the set of control systems 13742. Data from the sensor kit 28700 (including reporting packets, sensor kit packets, and/or other data from sensors 28702 and/or the data processing module 29020, the encoding module 29022, the quick-decision AI module 29024, the notification module 29026, the configuration module 29028, and the distributed ledger module 29030), and/or from the edge device 28704 may be represented in the set of industrial digital twins 13734. For example, an industrial digital twin 13734 may show a point cloud view of the industrial setting 28720 (which, in embodiments, may be augmented, such as using 3D mapping, AR or VR systems) with relevant data collection elements presented in the point cloud view along with the point cloud. Many examples are available, such as highlighting (such as by color or motion) in the digital twin 13734, areas of the point cloud where systems are vibrating in a way that is out of the normal range (such as where severity units, as discussed elsewhere herein, exceed a threshold). Industrial entity digital twins 13734 may include, link or connect to, or integrate with a variety of interfaces and dashboards 13738, such as ones configured for specific workflows, roles, and users. For example, dashboards and interfaces may be configured for workers who will interact with specific machines (such as where the digital twin is used for training, workflow guidance, diagnosis of problems, and the like); for managers of operations on a factory floor (such as where a digital twin 13734 displays a layout of machines on the floor, patterns of traffic (e.g., moving assets. 13708 and workers 13712) involved in workflows, status information for workers, machines, processes, or the like (including operational status, maintenance status, inspection status, and the like), analytic information (such as indicating metrics about operations, about potential problems, or the like); for inspectors (such as where the digital twin 13734 represents areas that are indicated by data collectors 13702 to require or benefit from additional inspection (e.g., where the inspector can check off items that have already been inspected or highlight items for further inspection by interacting with them in a digital twin interface or dashboard 13738); for maintenance and service workers (such as where a digital twin 13734 highlights locations of items requiring maintenance in a schematic view and guides the service workers to the right location and/or machine, then presents (such as in a different view) information and guidance on how to undertake the service or maintenance, ranging from a checklist or workflow to a virtual, mixed or augmented reality training or guidance session that can be presented at the machine); for front office managers (such as finance professionals who can be presented financial information, such as ROI metrics, output metrics, cost metrics, and the like (including current status and predictions), legal personnel (such as where a digital twin 13734 may present compliance information, highlight legal risks (such as safety violations or instances where status information about operations indicates a likelihood that the company may breach a contract (such as by failing to produce an output that is required by a contract) and the like), inventory managers, procurement personnel, and the like; and for executives, such as CEOs, CTOs, COOs, CIOs, CDOs, CMOs, and the like, who may interact with digital twins 13734 that represent whole factories, or sets of factories, such as to identify risks and opportunities that may involve understanding interactions of elements and/or contributions of elements involving industrial entities 13736 to overall operations of an enterprise, to its strategies, or the like. The digital twin 13734 may be updated based upon data from the sensor kit 28700 such that the digital twin 13734 is maintained in substantially real time.

In various embodiments, the interfaces and dashboards 13738 may display sensor information collected from the sensor kit 28700. Information elements from the industrial environment 13704 or about industrial setting 28720 can be presented in overlays (e.g., where metrics or symbols are presented on top of a point cloud, a photo, or a 3D representation of a unit in a 3D interface), in native form (such as where a point cloud is represented), in 3D visualizations (such as where the interface handles elements as 3D geometric elements), and the like.

A system is provided herein, including a set of industrial digital twins of a set of industrial entities supported by a data handling platform that has a set of intelligent processing capabilities; a set of mobile data collection systems that facilitate collection of data from and about a set of industrial entities; a set of simultaneous location and mapping systems that provide a set of scans of a set of industrial environments where the set of industrial entities are located; and an edge computation system that provides connectivity among the set of mobile data collection systems, the set of simultaneous location and mapping systems, the data handling platform, and a set of control systems for the industrial entities, wherein the information collected by the mobile data collection systems automatically associated with a set of visual representations of the industrial entities obtained via the simultaneous location and mapping system in the set of industrial digital twins. In embodiments, the system provides real time updating of the digital twins based on data collected about the industrial entities. In embodiments, the set of digital twins includes a single machine digital twin. In embodiments, the set of digital twins includes a system digital twin. In embodiments, the set of digital twins includes a workflow digital twin.

In embodiments, the set of digital twins includes a worker digital twin. In embodiments, the set of digital twins includes an arrangement digital twin displaying an arrangement of industrial entities in an industrial environment. In embodiments, the set of digital twins includes a logical digital twin representing entities and relationships in an industrial environment. In embodiments, the digital twin includes a set of interfaces. In embodiments, the set of interfaces includes an application programming interface. In embodiments, the set of interfaces includes a touch screen interface. In embodiments, the set of interfaces includes a graphical user interface. In embodiments, the set of interfaces includes an analytic dashboard interface.

In embodiments, the interface presents a metric of a probability of an unscheduled shutdown of at least one of the machines, a process, a system, a factory and a workflow. In embodiments, interaction with an interface of the set of industrial digital twins results in configuration of data collection. In embodiments, interaction with an interface of the set of industrial digital twins results in configuration of intelligence by an edge system. In embodiments, interaction with an interface of the set of industrial digital twins results in configuration of intelligence by a set of intelligence systems of the data handling platform. In embodiments, interaction with an interface of the set of industrial digital twins results in configuration of control of the set of industrial entities. In embodiments, the system is configured to interoperate with an enterprise resource planning system. In embodiments, the system is configured to interoperate with a maintenance and service system.

The methods and systems described herein may be used to provide hydrogen directly from a hydrolyzer for certain uses including uses that do not require the introduction of oxygen. In such embodiments that may only require a hydrogen gas, the hydrogen may be produced and sent directly for real-time uses such as a burner for heating, industrial heating processes like welding and brazing, and all other use cases that require direct-use hydrogen. Some other cases may include coating, tooling, extrusion, drying and the like. The methods and systems described herein may produce high-quality hydrogen gas for applications that require it, such as laser cutting. Other uses may include the production of hydrogen gas that may then be combined with other combustible gases for operations such as to generate a flame suitable for welding, for supplying an oxyhydrogen torch, and the like.

In applications where both the separated hydrogen and separated oxygen may be required for different purposes, the generation, storage, distribution and/or heating (e.g., cooking) system may direct independently both gases to their appropriate process uses. An example could be an electrolyzer on a submarine where the hydrogen may be used for a burner, and the oxygen used in the submarines air circulation system, and the like. In yet other embodiments the oxygen and hydrogen that have been separated during the hydrolysis process may need to be recombined under a protocol that produces a desired combination and rate of the combination of oxygen and hydrogen. One such example is Oxy-Hydrogen welding.

In embodiments, other examples of time-shifted uses of electrolyzer products that may benefit from and/or include hydrogen storage may include storing hydrogen in its non-compressed state, in its gaseous state, in its compressed liquid state or combinations thereof in a small tank that is part of a cooking or other industrial system, in a larger tank on or near the cooking system, or transported to very large holding tanks at a facility that is not nearby. Further examples of hydrogen storage technology may include absorbing the hydrogen by a substrate. The substrate may then be stored in a small tank or other substrate storage facility that may be part of the cooking system, in a larger tank on or near the cooking system, transported to very large holding tanks at a facility that is not nearby, or distributed across a plurality of small, medium, and large storage facilities that may facilitate local access to the stored energy. At the appropriate time, the substrate may be heated and the hydrogen may return to its original gaseous state.

Cooking and other heating systems that may use hydrogen as one of a plurality of sources of fuel may participate in automatically selecting among the sources of fuel. These systems may include processing capabilities that are connected to various information sources that may provide data regarding factors that may be beneficial to consider when determining which energy source to select. Determining which energy source to select may be based, for example on a single factor, such as a current price for one or more of the sources of energy. An energy source that provides sufficient energy at a lowest current price may be selected. In embodiments, a cooking or other heating system may automatically, under computer control, be configured for the selected source of energy. In an example, if hydrogen is selected, connections to a source of hydrogen may be activated, while connections to other sources may be deactivated. Likewise, burners, heater controls, heat and safety profiles, cooking times, and a range of other factors may be automatically adjusted based on the selected energy source. If during a cooking or heating operation, another source of energy is found to be less costly (such as electricity), systems may automatically be reconfigured for use of the other source of energy. Gas-fired heaters may be disabled and electric heating elements may be energized to continue the cooking and/or heating operation with minimal interruption. Such hybrid energy source cooking and/or heating processes may require a distinct protocol for completing a cooking or heating process based on the new source of energy.

Alternatively, automatic selection of a fuel source may be based on a multitude of factors. These factors may be applied to a fuel source selection algorithm that may process individually, in groups, or in combination a portion of the factors. Example factors may include the price of other energy sources, including energy sources that are available to the cooking and heating system as well as those that are not directly available. In this way, selecting an energy source may be driven by other considerations, such as which energy source is better for the environment, and the like. In embodiments, an automatic energy source selection may be based, at least in part on the anticipated availability of an energy source. In embodiments, predictions of energy outage, such as brownouts, may be based on a range of factors, including direct knowledge of scheduled brownouts and the like. Such predictions may also be based on prior experience regarding the availability of the source(s) of energy, which may be applied to machine learning algorithms that may provide predictions of future energy availability. Yet other factors that may be applied to an algorithm for automatically determining a source of energy may include availability of a source of water for producing hydrogen, availability of renewable energy (e.g., based on a forecast for sunlight, winds, and the like), level and/or intensity of need of the energy, anticipate level of need over a future period of time, such as the next 24 hours and the like. If an anticipate need over a future period of time includes large swings in demand over that timeframe, each peak in demand may be individually analyzed. Alternatively, an average or other derivatives of the demand over time may be used to determine a weighting for the various sources of energy.

In addition to energy selection for direct application to cooking and heating, energy selection for operating a hydrolyzer to produce hydrogen may be automated. Energy sources that may be included in such an automated selection process may include solar energy, wind energy, hydrogen energy, sulfur dioxide, electricity (such as from an electricity grid), natural gas, and the like. In embodiments, an algorithm that may facilitate automatic energy selection may receive information about each energy source, such as availability, costs, efficiency, and the like that may be processed by, for example comparing the information to determine which energy source provides the best fit for operating the hydrolyzer in a given time period. By way of this example, the algorithm may favor energy sources that are more reliable, more available, and lower costs than those that are less reliable, less available, and costlier. In embodiments, combinations of these three factors may result in certain sources being selected. If a demand for reliable energy at a particular time is weighted more highly than price, for example, a costlier energy source may be automatically selected due to it being more reliably available. An automatic fuel selection algorithm may also produce recommendations for fuel selection and a human or other automated process may make a selection. In an example, an automated fuel selection algorithm may recommend a fuel that is less costly, but may be somewhat less reliable than another source; however given the weighting or other aspects of the available information about the sources, such a recommendation may meet acceptance criteria of the algorithm.

Methods and systems described herein may be associated with methods and systems for automatic selection of an energy source, such as a method for determining an optimal use of renewable energy (such as solar, wind, geothermal, hydro and the like) or non-renewable fuel. In embodiments, a selection of energy source to power an onsite, stand alone cooking or heating system may be based on a variety of factors including access and distance to a source of renewable energy source as a primary source, directly to the cooking system. As an example, while production cost data available regarding hydro-based renewable energy may support its selection, a delivery network may not be in place or may charge a substantive premium for access to that particular renewable source; therefore hydro-based renewable energy may not be an optimal use.

In embodiments, other factors include pricing and amount of electricity required to use the cooking system and electrolyzer and the; ability of the source to match up availability with demand for generated power is required for both sustained periods of usage as well as short-term requirements. In embodiments, other factors that may impact an automated energy source selection process may include availability and ability to reuse excess heat from the cooking system and/or other nearby industrial facilities. In embodiments, excess heat may include exhaust heat, sulfur dioxide byproduct and the like that may be used to generate heat through a heat exchange process. In embodiments, another set of criteria for determining which energy source may be optimal for use by a cooking system as described herein may include comparing the need for short-term accessibility to power at arbitrary times throughout the day, compared to limiting timing of demand to power given timing and availability of power sources, such as nearby power sources. Sulfur dioxide as a waste heat byproduct may be used in a heat transfer process to recapture heat from the sulfur dioxide gas; however, it may also be applied directly to the hydrolyzer system to produce hydrogen. In embodiments, the sulfur dioxide gas may be applied directly to the hydrolyzer system to produce hydrogen and reduce the sulfur dioxide gas as a tool for environmental abatement by reducing the amount of the sulfur dioxide gas and use the generated hydrogen to burn trash and other items for its removal, for electricity generation, and the like.

In embodiments, external systems, such as information systems may be associated with or connected to hydrogen production, storage, distribution, and use systems as described herein. Information systems may receive information from all aspects and system processes including, energy selection (such as automated energy selection) including actual results as compared to predicted results, energy consumption, hydrogen generation for each type of energy source (solar, hydro-based, wind, exhaust gas, including sulfur dioxide use, and the like), hydrogen refinement processes, hydrogen storage (including compressed, natural state storage, substrate infusion-based, and the like), hydrogen distribution, uses, combinations with other fuel sources (such as hydrogen with another flammable energy medium) and the like, uses of the hydrogen including timing, costs, application environment, and the like.

In embodiments, communication to and from external systems may be through exchange of messages that may facilitate remote monitoring, remote control and the like. By way of this example, messages may include information about a source of the message, a destination, an objective (e.g., control, monitoring, and the like), recommended actions to take, alternate actions to take, actions to avoid, and the like.

In embodiments, methods and systems related to hydrogen production, storage, distribution and use may include, be associated with, or integrate improvement features that may provide ongoing improvements in system performance, quality and the like. In embodiments, improvement features may include process control and heat recovery, flow control and precision control, safety, reliability and greater service availability, process and output quality including output consistency. Other features that may be provided and/or be integrated with the hydrogen-based systems described herein may include data collection, analysis, and modeling for improvement, data security, cyber security, network security to avoid external attacks on control systems and the like, monitoring and analysis to facilitate preventive maintenance and repair.

In embodiments, integration and/or access to data processing systems that also have access to third-party data may be included in the methods and systems described herein. By monitoring data collected from sensors, time of day, weather conditions, and other data sources may be used with specific rule sets to trigger activation and/or stoppage of hydrogen use (e.g., cooking) operations. In embodiments, data may be accumulated in a continuous feedback loop that may capture data for a range of metrics associated with operations, such as cooking operations and the like. In embodiments, analysis and control of activation of such a system may factor in the actual requirements and timing when a cooking system needs to be used (such as when a meal is being prepared, such as breakfast, or when heating is required for an industrial operation, such as at the start of a new work shit and the like.

In embodiments, data collection, monitoring, process improvement, quality improvement, and the like may also be performed during operation of such a system. In an example, once a cooking system is activated, the system may be able to determine the best way to receive the heat required to perform the process at hand at that particular moment in time. Receiving the heat required to perform the process may be selected from a variety of heat sources including in-line hydrogen production, stored hydrogen consumption, combined energy utilization and the like. In embodiments, cooking elements with a mix of hydrogen and non-hydrogen heat burners may be automatically controllable so that the system should be able to automatically, using machine learning for example and continuous monitoring, decide to use one or the other source or a combination thereof.

Further in this example, a smart cooktop may include burners for hydrogen and for liquid propane. In embodiments, methods and systems for cooking operation may automatically activate the appropriate burner based on fuel selection (e.g., hydrogen burner or the liquid propane burner.). Operating such a cooking or heating system may be done by a computer enabled controller that may process factors including time of day, spot-pricing energy costs for each alternative, length of process involved, meeting 100% green requirements, potential hazardous use of flame depending on location of cooking system, other security features, and the like. To faciliate continuous improvement during operational control, data analysis may be performed on any or all aspects of the system. In an example, if the electrolyzer is not activated, sensors may capture information about the liquid propane burner that is being used. In embodiments, this single data capture example indicates that while it is desirable to collect information about all operational aspects to avoid missing information, practical considerations enable more focused data collection and analysis. In embodiments, every activity and action by the cooking system and heating element may be captured, recorded, measured, and used to inform actions such as quality improvement and the like.

In embodiments, information may be provided for one or more deployments of this cooking system to facilitate self-improvement and real-time decision making. In embodiments, information captured may also be stored and used in time-series analysis and the like to determine patterns that may indicate opportunities for improvement. In embodiments, data captured for a plurality of deployments may be used for creating and updating models that may be used for computer-generated simulations and the like. These models may be applied to design processes and the like. In embodiments, continuous improvement modifications may be activated by machine-to-machine learning programs, human improvement efforts, instructional improvement and/or modifications, and the like

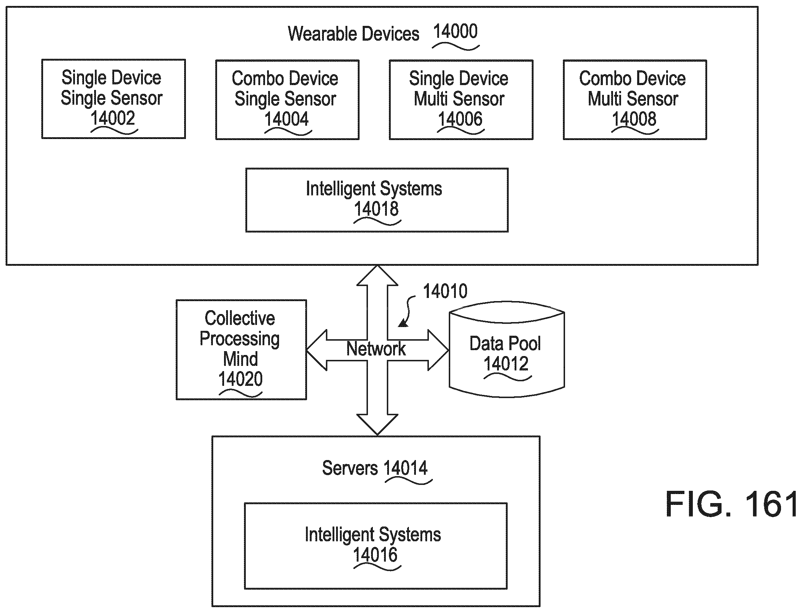

Systems and methods for using wearable devices for mobile data collection within an environment for industrial IoT data collection are next described with respect to FIGs. 161 to 164. Referring first to FIG. 161, a data collection system may include one or more wearable devices configured to act as mobile data collectors within an environment for industrial IoT data collection. For example, the one or more wearable devices may transmit data to, receive data from, transmit commands to, receive commands from, be under the control of, communicate controls for, or otherwise communicate with the industrial IoT data collection, monitoring and control system 10. Methods and systems are disclosed herein for data collection using wearable devices, including a single wearable device having a single sensor for recording state-related measurements (otherwise "measurements of states" or "state measurements," as noted below) within the environment for industrial IoT data collection, a single wearable device having multiple sensors for recording state-related measurements within the environment for industrial IoT data collection, multiple wearable devices each having a single sensor for recording state-related measurements within the environment for industrial IoT data collection, and multiple wearable devices each having one or more sensors for recording state-related measurements within the environment for industrial IoT data collection. For example, a wearable device may be a wearable haptic or multi-sensor user interface for an industrial sensor data collector, with vibration, heat, electrical, and/or sound outputs, and any other suitable outputs. In another example, a wearable device may be any other suitable device, component, unit, or other computational aspect having a tangible form and which is configured or otherwise able to be used by disposing on a person within an industrial environment, regardless of the period of time of such use. For example, a wearable device may be an article of clothing or a device included within an article of clothing. In another example, a wearable device may be an accessory article or a device included within an accessory article. Examples of articles of clothing that the wearable device can be or be included within include, without limitation, shirts, vests, jackets, pants, shorts, gloves, socks, shoes, protective outerwear, undergarments, undershirts, tank tops, and the like. Examples of accessory articles that the wearable device can be or be included within include, without limitation, hats, helmets, glasses, goggles, vision safety accessories, masks, chest bands, belts, lift support garments, antennae, wrist bands, rings, necklaces, bracelets, watches, brooches, neck straps, backpacks, front packs, arm packs, leg packs, lanyards, key rings, headphones, hearing safety accessories, earbuds, earpieces, and the like. Regardless of the particular form, a wearable device according to this disclosure includes one or more sensors for recording state-related measurements of an environment for industrial IoT data collection. For example, the one or more sensors of a wearable device described in this disclosure can measure states with respect to equipment within an industrial IoT environment or with respect to the industrial IoT environment itself. As used herein, a measurement of a state recorded using a sensor (e.g., of a wearable device or of any other suitable data collector) refers to information relating to a target of the environment for industrial IoT data collection. That is, the information directly or indirectly indicates a state of a target, or may otherwise be used to indicate a state of a target. For example, the information may indirectly indicate a state of a target where it is processed or otherwise used to identify or determine the state of the target. As used herein, the recording of a measurement using a sensor (e.g., of a wearable device or of any other suitable data collector) refers to the use of the sensor in making the measurement available for further processing. For example, recording a measurement using a sensor may refer to one or more of generating data indicative of the measurement, transmitting a signal indicative of the measurement, or otherwise obtaining values for the measurement.

A number of wearable devices 14000 are located within the environment for industrial IoT data collection. In some scenarios, the wearable devices 14000 may be wearable devices issued by an operator of the environment for industrial IoT data collection. Alternatively, the wearable devices 14000 may be wearable devices owned by workers selected to perform tasks within the environment for industrial IoT data collection. As shown in FIG. 161, the wearable devices 14000 may include any combination of a single wearable device with a single sensor 14002, a single wearable device with multiple sensors 14004, a combination of wearable devices each with a single sensor 14006, and a combination of wearable devices each with one or more sensors 14008. However, in embodiments, the wearable devices 14000 may include different wearable devices. For example, in embodiments, the wearable devices 14000 may omit the combination of wearable devices each with a single sensor 14006 and/or the combination of wearable devices each with one or more sensors 14008. For example, the wearable devices 14000 may be limited to individual wearable devices rather than combinations of wearable devices that offer combined, improved or otherwise different functionality when compared to each of the constituent wearable devices taken individually. In another example, in embodiments, the wearable devices 14000 may omit the single wearable device with the single sensor 14002 and/or the single wearable device with multiple sensors 14004. For example, the wearable devices 14000 may be limited to combinations of wearable devices rather than individual devices (e.g., where specific combinations of the wearable devices are identified as being valuable in particular contexts or otherwise for recording particular state-related measurements within the environment for industrial IoT data collection). Communications and other transfers of data between the wearable devices 14000 and the devices that receive the output from the wearable devices, or otherwise between the sensors within the wearable devices 14000 and a device that receives the output of those sensors, may be wireless or wired and may include such standard communication technologies as 802.11 and 900 MHz wireless systems, Ethernet, USB, firewire, and so on

In embodiments, different wearable devices 14000 may be configured to record certain types of state-related measurements of some or all of the targets (e.g., devices or equipment) within the environment for industrial IoT data collection. For example, some of the wearable devices 14000 may be configured to record state-related measurements of targets based on vibrations measured with respect to some or all of the targets. A vibration measured with respect to a target may refer to, without limitation, a frequency at which all or a portion of the target vibrates, a waveform derived from a vibration envelope associated with the target, vibration level changes, and the like. In another example, some of the wearable devices 14000 may be configured record state-related measurements of targets based on temperatures measured with respect to some or all of the targets. A temperature measured with respect to a target may refer to, without limitation, an internal or external temperature of all or a portion of the target, an operating temperature of the target, a temperature measured within an area around the target, and the like. In another example, some of the wearable devices 14000 may be configured to record state-related measurements of targets based on electrical or magnetic outputs measured with respect to some or all of the targets. An electrical or magnetic output measured with respect to a target may refer to, without limitation, a level or change in an electromagnetic field associated with the target, an amount of electricity or magnetic quality output from the target or otherwise emitted by the target, and the like. In another example, some of the wearable devices 14000 may be configured to record state-related measurements of targets based on sound outputs measured with respect to some or all of the targets. A sound output measured with respect to a target may refer to, without limitation, an audible or inaudible frequency corresponding to a sound wave generated by or in connection with the target, a sound wave emitted by a change in operation of the target, and the like. In another example, some of the wearable devices 14000 may be configured to record state-related measurements of targets based on outputs other than vibrations, temperatures, electrical or magnetic, or sound, as measured with respect to some or all of the targets.

Alternatively, or additionally, different wearable devices 14000 may be configured to record some or all state-related measurements of certain types of the targets within the environment for industrial IoT data collection. For example, some of the wearable devices 14000 may be configured to record some or all state-related measurements from agitators (e.g., turbine agitators), airframe control surface vibration devices, catalytic reactors, compressors and the like. In another example, some of the wearable devices 14000 may be configured to record some or all state-related measurements from conveyors and lifters, disposal systems, drive trains, fans, irrigation systems, motors, and the like. In another example, some of the wearable devices 14000 may be configured to record some or all state-related measurements from pipelines, electric powertrains, production platforms, pumps (e.g., water pumps), robotic assembly systems, thermic heating systems, tracks, transmission systems, turbines, and the like. In embodiments, the wearable devices 14000 may be configured to record some or all state-related measurements of certain types of industrial environments. For example, an industrial environment having targets with states measured using the wearable devices 14000 may include, but is not limited to, a manufacturing environment, a fossil fuel energy production environment, an aerospace environment, a mining environment, a construction environment, a ship environment, a shipping environment, a submarine environment, a wind energy production environment, a hydroelectric energy production environment, a nuclear energy production environment, an oil drilling environment, an oil pipeline environment, any other suitable energy product environment, any other suitable energy routing or transmission environment, any other suitable industrial environment, a factory, an airplane or other aircraft, a distribution environment, an energy source extraction environment, an offshore exploration site, an underwater exploration site, an assembly line, a warehouse, a power generation environment, a hazardous waste environment, and the like.

The combination of wearable devices each with a single sensor 14006 and/or the combination of wearable devices each with one or more sensors 14008 may represent a combination of wearable devices selected for use together within the environment for industrial IoT data collection. For example, the combination of wearable devices each with a single sensor 14006 and/or the combination of wearable devices each with one or more of the sensors 14008 may represent all or a portion of an industrial uniform to be worn by a worker performing one or more tasks within the environment for industrial IoT data collection. For example, the combination of wearable devices each with the single sensor 14006 and/or the combination of wearable devices each with one or more of the sensors 14008 may include one of each of a number of wearable devices to be worn by the user (e.g., one hat, one shirt, one pair of pants, one pair of shoes, one vest, one necklace, one bracelet, one backpack, or more or fewer wearable devices). Embodiments of this disclosure may contemplate industrial uniforms as including other possible combinations of the wearable devices as the combination of wearable devices each with the single sensor 14006 and/or the combination of wearable devices each with one or more of the sensors 14008.

In embodiments, the combined use of multiple sensors, either as the combination of wearable devices each with the single sensor 14006 and/or as the combination of wearable devices each with one or more of the sensors 14008, may introduce extended or additional functionality for industrial IoT data collection. Thus, in some of those embodiments, an industrial uniform may include functionality beyond what is provided by the individual sensors that are integrated within the industrial uniform. For example, the output of wearable devices with sensors for recording state-related measurements of the same target may be pre-processed by a central processing software or hardware aspect integrated within or otherwise corresponding to the industrial uniform (e.g., a collective processing mind, as described below). For example, the central processing software or hardware aspect integrated within or otherwise corresponding to the industrial uniform may process the output of multiple wearable devices to determine whether the output is the same for a particular observed measurement of a target. Where one of those outputs is more than a threshold deviation from the other outputs, that deviated output may be discarded. For example, the discarded output may represent output produced using a sensor that suffered from interference or other issues while recording the state-related measurement of the target. In another example, the central processing software or hardware aspect integrated within or otherwise corresponding to the industrial uniform may process different types of output (e.g., recorded based on different targets or different state-related measurement types, for example, vibrational versus temperature) of multiple wearable devices to determine or identify a state of the target. For example, it may be the case that a state is indicated by a combination of outputs. In such a scenario, a first output from a first wearable device can be combined or otherwise processed along with a second output from a second wearable device to determine or identify the state of the target. Different combinations of wearable devices may be identified as different industrial uniforms, in which each of the industrial uniforms may have the same or different capabilities with respect to recording types of state-related measurements of targets. In yet another example, the integration of multiple wearable devices within an industrial uniform allows for the concurrent or substantially concurrent processing of state-related measurements recorded using those wearable devices.

The state-related measurements using the wearable devices 14000 may be made available over a network 14010 (e.g., without the need for external networks). The network 14010 may be a MANET (e.g., the MANET 20 shown in Figure 2 or any other suitable MANET), the Internet (e.g., the Internet 110 shown in Figure 3 or any other suitable Internet), or any other suitable type of network, or any combination thereof. For example, the network 14010 may be used to receive state-related measurements recorded using the wearable devices 14000. The network 14010 may then be used to transmit some or all of those received state-related measurements to other components of the data collection system 102. For example, the network 14010 may be used to transmit some or all of the received state-related measurements to a data pool 14012 (e.g., the data pool 60 shown in Figure 2 or any other suitable data pool) for storage of those received state-related measurements. In another example, the network 14010 may be used to transmit some or all of the received state-related measurements to one or more servers 14014 corresponding to the environment for industrial IoT data collection. The servers 14014 may include one or more hardware or software server aspects. For example, the servers 14014 to which the received state-related measurements are transmitted may include intelligent systems 14016 that process the received state-related measurements. The intelligent systems 14016 may process the received state-related measurements in any suitable manner, including using artificial intelligence processes, machine learning processes, and/or other cognitive processes to identify information within or otherwise associated with the received state-related measurements. In embodiments, after processing the received state-related measurements, the servers 14014 to which the received state-related measurements are transmitted may transmit the processed information or data indicative of the processed information to other systems (e.g., for storage or analysis). The data indicative of the processed information from the servers 14014 may include, for example, output or other results of the artificial intelligence processes, machine learning processes, and/or other cognitive processes.

In embodiments, some or all of the wearable devices 14000 may include intelligent systems 14018 for processing the state-related measurements recorded using those wearable devices 14000 before transmitting those recorded state-related measurements (e.g., over the network 14010) or any other suitable communication mechanism. For example, some or all of the wearable devices 14000 may integrate artificial intelligence processes, machine learning processes, and/or other cognitive processes for analyzing the state-related measurements recorded thereby. The processing by the intelligent systems 14018 of the wearable devices 14000 may be or be represented within a pre-processing step of the industrial IoT data collection, monitoring and control system 10. For example, the pre-processing may be selectively performed by certain types of the wearable devices 14000 to pre-process the recorded state-related measurements, for example, to identify redundant information, irrelevant information, or insignificant information. In another example, the pre-processing may be automated for certain types of the wearable devices 14000 to pre-process the recorded state-related measurements, for example, to identify redundant information, irrelevant information, or insignificant information. In another example, the pre-processing may be selectively performed for certain types of state-related measurements recorded by any of the wearable devices 14000 to pre-process the recorded state-related measurements, for example, to identify redundant information, irrelevant information, or insignificant information. In another example, the pre-processing may be automated for certain types of state-related measurements recorded by any of the wearable devices 14000 to pre-process the recorded state-related measurements, for example, to identify redundant information, irrelevant information, or insignificant information.

In embodiments, some or all of the wearable devices 14000 may include sensor fusion functionality. For example, the sensor fusion functionality may be embodied as the on-device sensor fusion 80. For example, state-related measurements recorded using multiple analog sensors of one or more of the wearable devices 14000 (e.g., the multiple analog sensors 82 shown in Figure 4 or any other suitable sensor) may be locally or remotely processed (e.g., using artificial intelligence processes, machine learning processes, and/or other cognitive processes), which may be embodied within the wearable devices 14000 themselves, within the servers 14014, within both, or within any other suitable hardware or software. For example, the output of the sensors integrated within the wearable devices 14000 may be provided directly to the on-device sensor fusion aspect 80. The sensor fusion functionality may be embodied by a pre-processing step that is performed prior to the artificial intelligence processes, machine learning processes, and/or other cognitive processes. In embodiments, the sensor fusion functionality may be performed using a MUX. For example, each of the single wearable devices with multiple sensors 14004 may include its own MUX for combining state-related measurements recorded using different individual sensors of those multiple sensors. In another example, some or all of the individual wearable devices within the combination of wearable devices each with one or more sensors 14008 may include its own MUX for combining state-related measurements recorded using different individual sensors of those multiple sensors. In some such embodiments, the MUX may be internal to those wearable devices. In some such embodiments, the MUX may be external to those wearable devices.

In embodiments, the wearable devices 14000 may be controlled by or otherwise used in connection within a host processing system 112 shown in Figure 6 (or any other suitable host system). The host processing system 112 may be locally accessible over the network 14010. Alternatively, the host processing system 112 may be remote (e.g., embodied in a cloud computing system), may be accessible using one or more network infrastructure elements (e.g., access points, switches, routers, servers, gateways, bridges, connectors, physical interfaces and the like), and/or may use one or more network protocols (e.g., IP-based protocols, TCP/IP, UDP, HTTP, Bluetooth, Bluetooth Low Energy, cellular protocols, LTE, 2G, 3G, 4G, 5G, CDMA, TDSM, packet-based protocols, streaming protocols, file transfer protocols, broadcast protocols, multi-cast protocols, unicast protocols, and the like). In embodiments, the state-related measurements recorded using the wearable devices 14000 may be processed using a network coding system or method, which may be embodied internally or externally with respect to the host processing system 112. For example, the network coding system can process the measurements recorded using the wearable devices 14000 based on the availability of networks for communicating those recorded state-related measurements, based on the availability of bandwidth and spectrum for communicating those recorded state-related measurements, based on other network characteristics, or based on some combination thereof.

In embodiments, the state-related measurements recorded using the wearable devices 14000 may be pulled from the wearable devices 14000 by an upstream device (e.g., a client device or other software or hardware aspect used to review, analyze, or otherwise view the state-related measurements). For example, the wearable devices 14000 may not actively transmit the state-related measurements that are received (e.g., at the servers 14014, the data pool 14012, or any other suitable hardware or software component that receives the state-related measurements recorded using the wearable devices 14000). Rather, the transmission of the state-related measurements from the wearable devices 14000 may be caused by commands received at the wearable devices 14000 (e.g., from servers 14014 or from other hardware or software of the data collection system 102). For example, a data collector, which may be fixed within a particular location of the environment or which may be mobile with respect to the environment, may be configured to pull state-related measurements recorded by various wearable devices 14000. For example, the wearable devices 14000 may continuously, periodically, or otherwise at multiple times record state-related measurements within the environment for industrial IoT data collection. The data collector may, at fixed intervals, at random times, or otherwise, transmit one or more commands to some or all of the wearable devices 14000 (e.g., to pull some or all of the state-related measurements recorded by those wearable devices 14000 since the last time state-related measurements were pulled therefrom). Alternatively, the data collector may, at those fixed intervals, at those random times, or otherwise, transmit the one or more commands to a collective processing mind 14020 associated with the wearable devices 14000. For example, the collective processing mind 14020 may be or include a hub for receiving the state-related measurements recorded using some or all of the wearable devices 14000. In another example, the commands, when processed using individual wearable devices 14000 or by the collective processing mind 14020 of the wearable devices 14000, cause the recorded state-related measurements or data representative thereof to be transmitted from the wearable devices 14000. For example, the collective processing mind 14020 may be configured to pull the state-related measurements from some or all of the wearable devices 14000 (e.g., at fixed intervals, at random times, or otherwise). The collective processing mind 14020 may then transmit the state-related measurements pulled from the wearable devices 14000 (e.g., to the servers 14014, the data pool 14012, or the other hardware or software component selected or otherwise configured to receive the state-related measurements).

In embodiments, the state-related measurements recorded using the wearable devices 14000 may be transmitted from the wearable devices 14000 responsive to requests for those state-related measurements. For example, the collective processing mind 14020 may, at fixed intervals, at random times, or otherwise, transmit a request for recorded state-related measurements to some or all of the wearable devices 14000. The processors of some or all of the wearable devices 14000 to which the request is sent may process the request to determine which state-related measurements to transmit. For example, data indicative of a time of a most recent request for recorded state-related measurements may be accessed by those processors. The processors may then compare that time to a time at which the new request is received from the collective processing mind 14020. The processors may then query a data store for state-related measurements recorded between the two times. The processors may then transmit those state-related measurements in response to the request. In another example, the processors may identify a most recent set of state-related measurements recorded using the corresponding wearable devices 14000 and transmit those state-related measurements in response to the request. In another example, data collectors within the data collection system 10 may transmit the request directly to the wearable devices 14000. In yet another example, the data collectors may transmit the request to the collective processing mind 14020. The collective processing mind 14020 may process the request to determine select individual wearable devices 14000 which were used to record the requested state-related measurements. The collective processing mind 14020 may then transmit certain state-related measurements in response to the request by, for example, querying a storage for some or all of the state-related measurements recorded using those select individual wearable devices 14000. Alternatively, the collective processing mind 14020 may process the request to determine which of the state-related measurements recorded by some or all of the wearable devices 14000 to transmit in response to the request (e.g., based on a time of the request). For example, the collective processing mind 14020 can compare the time of the request to a time of a most recent request for recorded state-related measurements. The collective processing mind 14020 can then retrieve the state-related measurements recorded in between those times and transmit the retrieved state-related measurements in response to the request.

In embodiments, the state-related measurements may be pushed from the wearable devices 14000 to an upstream device (e.g., a client device or other software or hardware aspect used to review, analyze, or otherwise view the state-related measurements). For example, the wearable devices 14000 may actively transmit the state-related measurements that are received (e.g., to the servers 14014, the data pool 14012, or any other suitable hardware or software component that receives the state-related measurements recorded using the wearable devices 14000) without such receiving hardware or software component requesting those state-related measurements or otherwise causing the wearable device to transmit those state-related measurements based on a command. For example, some or all of the wearable devices 14000 may transmit state-related measurements on a fixed interval, at random times, immediately upon the recording of those state-related measurements, some amount of time after recording those measurements, upon a determination that a threshold number of state-related measurements have been recorded, or at other suitable times. In some such embodiments, the wearable devices 14000, either by themselves or using the collective processing mind 14020, may push the recorded state-related measurements in response to detecting a near proximity of a data collection router 14014.

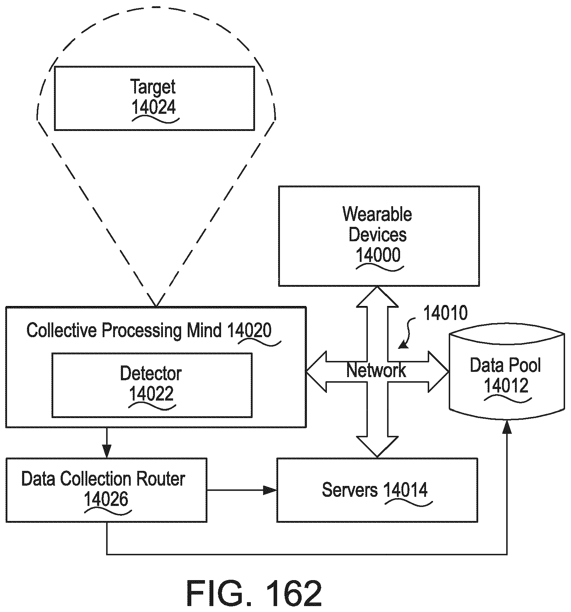

For example, referring next to Figure 162, the collective processing mind 14020 may include a detector 14022 configured to detect a near proximity of a target 14024 (e.g., one of the devices 13006 shown in Figure 134 or any other suitable target) with respect to one or more of the wearable devices 14000. For example, upon such a detection, the collective processing mind 14020 may send a signal to the one or more of the wearable devices 14000 to record and transmit state-related measurements of receipt at a data collection router 14026. Alternatively, upon such a detection, the collective processing mind 14020 may query a data store to retrieve state-related measurements and then transmit those state-related measurements of receipt at the data collection router 14026. In either case, the data collection router 14026 forwards the received state-related measurements to the servers 14014, the data pool 14012, or any other suitable hardware or software component. In another example, upon such a detection, the collective processing mind 14020 may send the signal directly to the servers 14014, the data pool 14012, or the other hardware or software component, for example, to bypass the data collection router 14026 or where the data collection router 14026 is omitted.

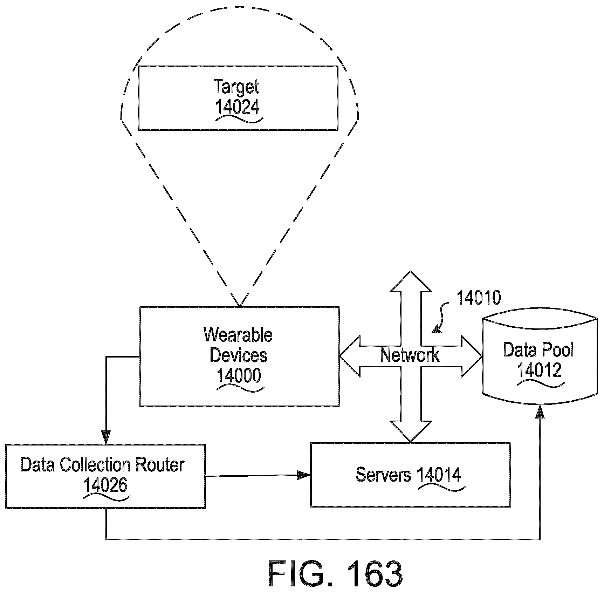

Referring next to Figure 163, in embodiments, the collective processing mind 14020 may be omitted. In some of these embodiments, the wearable devices 14000 may detect the near proximity of the target 14024. Upon such detection, the wearable devices 14000 may record state-related measurements of the target 14024 (e.g., vibrations, temperature, electrical or magnetic output, sound output, or the like). The recorded state-related measurements can be transmitted over the network 14010 (e.g., to the data pool 14012, the servers 14014, or any other suitable hardware or software component). Alternatively, the recorded state-related measurements can be transmitted to the data collection router 14026, for example, where the network 14010 is unavailable or where the data collection router 14026 is configured to receive and/or pre-process the recorded state-related measurements from the wearable devices 14000. The data collection router 14026 may be one of a number of data collection routers 14026 located throughout the environment for industrial IoT data collection. For example, the data collection router 14026 may be the data collection router 14026 configured to transmit state-related measurements specifically recorded for the target 14024.

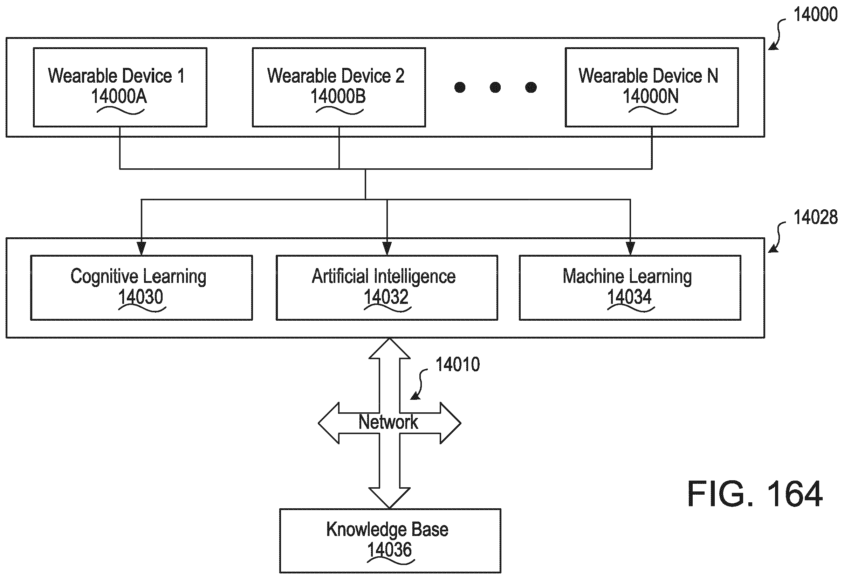

Referring next to Figure 164, various aspects of functionality of intelligent systems 14028 used to process output of the wearable devices 14000 are disclosed. In embodiments, the intelligent systems 14028 include a cognitive learning module 14030, an artificial intelligence module 14032, and a machine learning module 14034. The intelligent systems 14028 may include additional or fewer modules. The intelligent systems 14028 may, for example, be the intelligent systems 14018 or the intelligent systems 14016 shown in Figure 161 or other intelligent systems. Although shown as separate modules, in embodiments, there may be an overlap between some or all of the cognitive learning module 14030, the artificial intelligence module 14032, and the machine learning module 14034. For example, the artificial intelligence module 14032 may include the machine learning module 14034. In another example, the cognitive learning module 14030 may include the artificial intelligence module 14032 (and, in embodiments, therefore, the machine learning module 14034). The wearable devices 14000 may include any number of wearable devices. For example, as shown, the wearable devices 14000 include a first wearable device 14000A, a second wearable device 14000B, and an Nth wearable device 14000N, where N is a number greater than two. The intelligent systems 14028 receives the output of the wearable devices 14000A, 14000B, ... 14000N. In particular, one or more of the modules 14030, 14032, and 14034 of the intelligent systems 14028 receives data generated by and output from one or more of the wearable devices 14000A, 14000B, ... 14000N. The output from the wearable devices 14000A, 14000B, ... 14000N may, for example, include state-related measurements recorded using the wearable devices 14000A, 14000B, ... 14000N (e.g., state-related measurements of equipment within an environment for industrial IoT data collection). In embodiments, the output from the wearable devices 14000A, 14000B, ... 14000N may be processed by all three of the modules 14030, 14032, and 14034 of the intelligent systems 14028. In embodiments, the output from the wearable devices 14000A, 14000B, ... 14000N may be processed by only one of the modules 14030, 14032, and 14034 of the intelligent systems 14028. For example, the particular one of the modules 14030, 14032, and 14034 of the intelligent systems 14028 to use to process the output from the wearable devices 14000A, 14000B, ... 14000N may be selected based on the wearable device used to generate that output, the equipment measured in generating that output, the values of the output, other selection criteria, and the like.

A knowledge base 14036 may be updated based on output from the intelligent systems 14028. The knowledge base 14036 represents a library or other set or collection of knowledge related to the environment of the industrial IoT data collection, including equipment within that environment, tasks performed within that environment, personnel having the skill to perform tasks within that environment, and the like. The intelligent systems 14028 can process the state-related measurements recorded using the wearable devices 14000A, 14000B, ... 14000N to facilitate knowledge gathering for expanding the knowledge base 14036. For example, the modules 14030, 14032, and 14034 of the intelligent systems 14028 can process those state-related measurements against existing knowledge within the knowledge base 14036 to update or otherwise modify information within the knowledge base 14036. The intelligent systems 14028 may use intelligence and machine learning capabilities (e.g., of the machine learning module 14034 or as described elsewhere in this disclosure) to process state-related measurements and related information based on detected conditions (e.g., conditions informed by the wearable devices 14000 and/or provided as training data) and/or state information (e.g., state information determined by a machine state recognition system that may determine a state, for example, information relating to an operational state, an environmental state, a state within a known process or workflow, a state involving a fault or diagnostic condition, and the like). This may include optimization of input selection and configuration based on learning feedback from the learning feedback system, which may include providing training data (e.g., from a host processing system or from other data collection systems either directly or from the host processing system) and may include providing feedback metrics (e.g., success metrics calculated within an analytic system of the host processing system). Examples of host processing systems, learning feedback systems, data collection systems, and analytic systems are described elsewhere in this disclosure. Thus, the intelligent systems 14028 can be used to update workflows of tasks assigned and performed within the industrial IoT environment based on output from the wearable devices 14000A, 14000B, ... 14000N.

In embodiments, the intelligent systems 14028, either within one of the modules 14030, 14032, and 14034 or otherwise, may include other intelligence or machine learning aspects. For example, the intelligent systems 14028 may include one or more of a you only look once (YOLO) neural network, a YOLO convolutional neural network (CNN), a set of neural networks configured to operate on or from a FPGA, a set of neural networks configured to operate on or from a FPGA and graphics processing unit (GPU) hybrid component, a user configurable series and parallel flow for a hybrid neural network (e.g., configuring series and/or parallel flows between neural networks as outputs which can be communicated between such neural networks), a machine learning system for automatically configuring a topology or workflow for a set of hybrid neural networks (e.g., series, parallel, data flows, etc.) based on a training data set which may or may not use manual configurations (e.g., by a human user), a deep learning system for automatically configuring a topology or workflow for a set of hybrid neural networks (e.g., series, parallel, data flows, etc.) based on a training data set of outcomes from industrial IoT processes (e.g., maintenance, repair, service, prediction of faults, optimization of operation of a machine, system of facility, etc.), or other intelligence or machine learning aspects.

Thus, in embodiments, the output of the wearable devices 14000 may be processed using the intelligent systems 14028 to add to, remove from, or otherwise modify the knowledge base 14036. For example, the knowledge base 14036 may reflect information to use to perform one or more tasks within the industrial environment in which the targets are located and in which the wearable devices 14000 are used. The output from the wearable devices 14000 can thus be used to increase knowledge as to the nature of issues that arise with respect to the industrial environment, for example, by describing information about the target from which measurements were recorded, a time and/or date at which the measurements were recorded, pre-existing state or other condition information about the target, information about the time required to resolve an issue with respect to a target, information about how to resolve an issue with respect to a target, information indicating an amount of downtime to the target and to other aspects of the respective industrial environment resulting from resolving the issue, an indication of whether the issue should be resolved now or later (or not at all), and the like. The intelligent systems 14028 may process that output to update existing training data. For example, the existing training data can be used to update the machine learning, artificial intelligence, and/or other cognitive functionality for identifying states of targets based on the output of the wearable devices 14000.

For example, the knowledge base 14036 may include a series of databases or other tables or graphs arranged hierarchically based on the target or the area of the industrial environment that includes the target. For example, a first layer of the knowledge base 14036 may refer to the industrial environment (e.g., a power plant, a manufacturing facility, a mining facility, etc.). A second layer of the knowledge base 14036 may refer to zones within the industrial environment (e.g., zone 1, zone 2, etc., or named zones, as the case may be). A third layer of the knowledge base 14036 may refer to targets within those zones (e.g., within a first zone of a power plant including electrical equipment, this could include alternators, circuit breakers, transformers, batteries, exciters, etc., and, within a second zone of a power plant including a turbine, a generator, a generator magnet, etc.). The knowledge base 14036 may be updated based on output of the intelligent systems 14028, by manual user data entry, or both. For example, a worker within a power plant may be given one or more wearable devices (e.g., the wearable devices 14000). In approaching a turbine, one of the wearable devices 14000 having a sensor for recording vibrational measurements may determine that the turbine is vibrating at a particular rate. The output of the wearable device is processed by the intelligent systems 14028, such as by comparing that output against the set of known data for the turbine. For example, the intelligent systems 14028 can query data from the knowledge base 14036 indicating historical measurements recorded with respect to the vibrations of that turbine within that particular power plant. The intelligent systems 14028 can then determine whether the new output from the wearable device is consistent with the data within the knowledge base 14036 or is deviant therefrom. In the event the new output deviates from the data within the knowledge base, the intelligent systems 14028 can update the data within that portion of the knowledge base 14036 to reflect the new output. Alternatively, the updating of the knowledge base 14036 may be delayed, for example, until after a threshold number of deviant output measurements are recorded, so as to prevent misrepresentative output from being used to modify the operational understanding of the turbine.

Disclosed herein are systems for data collection in an industrial environment with wearable device integration. As used herein, wearable device integration refers to using wearable devices for specific or general purposes. For example, wearable device integration as described with respect to the functionality or configuration of a system refers to the use by that system of the wearable devices 14000 and/or the hardware and/or software used in connection with the wearable devices 14000 for data collection within an industrial IoT environment, for example, as shown in FIGS. 161 to 164. Such wearable device integration refers to the use of one or more of the wearable devices 14000. For example, a system disclosed herein as including wearable device integration may include integration of one or more of a shirt, vest, jacket, pair of pants, pair of shorts, glove, sock, shoe, protective outerwear, undergarment, undershirt, tank top, hat, helmet, glasses, goggles, vision safety accessory, mask, chest band, belt, lift support garment, antenna, wrist band, ring, necklace, bracelets, watch, brooch, neck strap, backpack, front pack, arm pack, leg pack, lanyard, key ring, headphones, hearing safety accessory, earbuds, or earpiece, or of other types of wearable devices or articles (e.g., articles of clothing and/or accessory articles) including such other types of wearable devices.

In embodiments, a system for data collection in an industrial environment having the use of an analog cross point switch for collecting variable groups of analog sensor inputs with wearable device integration is disclosed.

In embodiments, a system for data collection in an industrial environment having IP front signal conditioning on a multiplexer for improved signal-to-noise ratio with wearable device integration is disclosed.

In embodiments, a system for data collection in an industrial environment having multiplexer continuous monitoring alarming features with wearable device integration is disclosed.

In embodiments, system for data collection in an industrial environment having the use of distributed CPLD chips with dedicated bus for logic control of multiple MUX and data acquisition sections with wearable device integration is disclosed.

In embodiments, a system for data collection in an industrial environment having high-amperage input capability using solid state relays and design topology with wearable device integration is disclosed.

In embodiments, system for data collection in an industrial environment having power-down ability of at least one of an analog sensor channel and a component board with wearable device integration is disclosed.

In embodiments, a system for data collection in an industrial environment having unique electrostatic protection for trigger and vibration inputs with wearable device integration is disclosed.

In embodiments, a system for data collection in an industrial environment having precise voltage reference for A/D zero reference with wearable device integration is disclosed.

In embodiments, a system for data collection in an industrial environment having a phase-lock loop band-pass tracking filter for obtaining slow-speed RPMs and phase information with wearable device integration is disclosed.

In embodiments, a system for data collection in an industrial environment having digital derivation of phase relative to input and trigger channels using on-board timers with wearable device integration is disclosed.

In embodiments, a system for data collection in an industrial environment having a peak-detector for auto-scaling that is routed into a separate analog-to-digital converter for peak detection with wearable device integration is disclosed.

In embodiments, a system for data collection in an industrial environment having routing of a trigger channel that is either raw or buffered into other analog channels with wearable device integration is disclosed.

In embodiments, a system for data collection in an industrial environment having the use of higher input oversampling for delta-sigma A/D for lower sampling rate outputs to minimize AA filter requirements with wearable device integration is disclosed.

In embodiments, a system for data collection in an industrial environment having the use of a CPLD as a clock-divider for a delta-sigma analog-to-digital converter to achieve lower sampling rates without the need for digital resampling with wearable device integration is disclosed.

In embodiments, a system for data collection in an industrial environment having long blocks of data at a high-sampling rate as opposed to multiple sets of data taken at different sampling rates with wearable device integration is disclosed.

In embodiments, a system for data collection in an industrial environment having storage of calibration data with maintenance history on-board card set with wearable device integration is disclosed.

In embodiments, a system for data collection in an industrial environment having a rapid route creation capability using hierarchical templates with wearable device integration is disclosed.

In embodiments, a system for data collection in an industrial environment having intelligent management of data collection bands with wearable device integration is disclosed.

In embodiments, a system for data collection in an industrial environment having a neural net expert system using intelligent management of data collection bands with wearable device integration is disclosed.

In embodiments, a system for data collection in an industrial environment having use of a database hierarchy in sensor data analysis with wearable device integration is disclosed.

In embodiments, a system for data collection in an industrial environment having an expert system GUI graphical approach to defining intelligent data collection bands and diagnoses for the expert system with wearable device integration is disclosed.

In embodiments, a system for data collection in an industrial environment having a graphical approach for back-calculation definition with wearable device integration is disclosed.

In embodiments, a system for data collection in an industrial environment having proposed bearing analysis methods with wearable device integration is disclosed.

In embodiments, a system for data collection in an industrial environment having torsional vibration detection/analysis utilizing transitory signal analysis with wearable device integration is disclosed.

In embodiments, a system for data collection in an industrial environment having improved integration using both analog and digital methods with wearable device integration is disclosed.

In embodiments, a system for data collection in an industrial environment having adaptive scheduling techniques for continuous monitoring of analog data in a local environment with wearable device integration is disclosed.

In embodiments, a system for data collection in an industrial environment having data acquisition parking features with wearable device integration is disclosed.

In embodiments, a system for data collection in an industrial environment having a self-sufficient data acquisition box with wearable device integration is disclosed.

In embodiments, a system for data collection in an industrial environment having SD card storage with wearable device integration is disclosed.

In embodiments, a system for data collection in an industrial environment having extended onboard statistical capabilities for continuous monitoring with wearable device integration is disclosed.

In embodiments, a system for data collection in an industrial environment having the use of ambient, local and vibration noise for prediction with wearable device integration is disclosed.

In embodiments, a system for data collection in an industrial environment having smart route changes route based on incoming data or alarms enable simultaneous dynamic data for analysis or correlation with wearable device integration is disclosed.

In embodiments, a system for data collection in an industrial environment having smart ODS and transfer functions with wearable device integration is disclosed.

In embodiments, a system for data collection in an industrial environment having hierarchical multiplexer with wearable device integration is disclosed.

In embodiments, a system for data collection in an industrial environment having identification sensory overload with wearable device integration is disclosed.

In embodiments, a system for data collection in an industrial environment having RF identification and an inclinometer with wearable device integration is disclosed.

In embodiments, a system for data collection in an industrial environment having continuous ultrasonic monitoring with wearable device integration is disclosed.

In embodiments, a system for data collection in an industrial environment having cloud-based, machine pattern recognition based on fusion of remote, analog industrial sensors with wearable device integration is disclosed.

In embodiments, a system for data collection in an industrial environment having cloud-based, machine pattern analysis of state information from multiple analog industrial sensors to provide anticipated state information for an industrial system with wearable device integration is disclosed.

In embodiments, a system for data collection in an industrial environment having cloud-based policy automation engine for IoT, with creation, deployment and management of IoT devices with wearable device integration is disclosed.

In embodiments, a system for data collection in an industrial environment having on-device sensor fusion and data storage for industrial IoT devices with wearable device integration is disclosed.

In embodiments, a system for data collection in an industrial environment having a self-organizing data marketplace for industrial IoT data with wearable device integration is disclosed.

In embodiments, a system for data collection in an industrial environment having self-organization of data pools based on utilization and/or yield metrics with wearable device integration is disclosed.

In embodiments, a system for data collection in an industrial environment having training AI models based on industry-specific feedback with wearable device integration is disclosed.

In embodiments, a system for data collection in an industrial environment having a self-organized swarm of industrial data collectors with wearable device integration is disclosed.

In embodiments, a system for data collection in an industrial environment having an IoT distributed ledger with wearable device integration is disclosed.

In embodiments, a system for data collection in an industrial environment having a self-organizing collector with wearable device integration is disclosed.

In embodiments, a system for data collection in an industrial environment having a network-sensitive collector with wearable device integration is disclosed.

In embodiments, a system for data collection in an industrial environment having a remotely organized collector with wearable device integration is disclosed.

In embodiments, a system for data collection in an industrial environment having a self-organizing storage for a multi-sensor data collector with wearable device integration is disclosed.

In embodiments, a system for data collection in an industrial environment having a self-organizing network coding for multi-sensor data network with wearable device integration is disclosed.

In embodiments, a system for data collection in an industrial environment having a wearable haptic user interface for an industrial sensor data collector, with vibration, heat, electrical and/or sound outputs with wearable device integration is disclosed.

In integrations, a system for data collection in an industrial environment having heat maps displaying collection data for AR/VR with wearable device integration is disclosed.

In embodiments, a system for data collection in an industrial environment having automatically tuned AR/VR visualization of data collected by a data collector with wearable device integration is disclosed.

In embodiments, an intelligent cooking system having processing, communications, and other IT components for remote monitoring and control with wearable device integration is disclosed.

In embodiments, an intelligent cooking system having a hydrogen fuel generating electrolyzer that operates on a water source to separate hydrogen and oxygen components with wearable device integration is disclosed.

In embodiments, an intelligent cooking system having a low-pressure hydrogen storage system that stores the hydrogen generated by an electrolyzer with wearable device integration is disclosed.

In embodiments, an intelligent cooking system having a fuel control module that automatically controls fuel sourcing or mixing devices based on some measure of historical, current, planned, and/or anticipated consumption or availability with wearable device integration is disclosed.

In embodiments, an intelligent cooking system having a solar-powered hydrogen electrolyzer with wearable device integration is disclosed.

In embodiments, an intelligent cooking system having a wind-powered hydrogen electrolyzer with wearable device integration is disclosed.

In embodiments, an intelligent cooking system having a hydro-powered hydrogen electrolyzer with wearable device integration is disclosed.

In embodiments, an intelligent cooking system having an on-demand gas-LPG hybrid burner that sources LPG, hydrogen, or other fuel dynamically without need for user input or monitoring with wearable device integration is disclosed.

In embodiments, an intelligent cooking system having an enclosed burner chamber that provides heat in a target heat-zone as a plane of heat with wearable device integration is disclosed.

In embodiments, an intelligent cooking system having a smart knob with connectivity and local and remote control for controlling the intelligent cooktop device or other IoT devices with wearable device integration is disclosed.

In embodiments, an intelligent cooking system having a mobile docking facility with power for charging a mobile device, data communications, and heat protection with wearable device integration is disclosed.

In embodiments, an intelligent cooking system having distributed modules or components that are located in sub-systems of the cooktop with wearable device integration is disclosed.

In embodiments, an intelligent cooking system having a centralized control facility to manage operation of sub-systems of the cooktop with wearable device integration is disclosed.

In embodiments, an intelligent cooking system having remote control capability with wearable device integration is disclosed.

In embodiments, an intelligent cooking system having automation with wearable device integration is disclosed.

In embodiments, an intelligent cooking system having detectors and sensors for monitoring cooking system conditions with wearable device integration is disclosed.

In embodiments, an intelligent cooking system having machine learning for optimizing cooking system operation with wearable device integration is disclosed.

In embodiments, an intelligent cooking system having a mobile application with wearable device integration is disclosed.

In embodiments, an intelligent cooking system having a cloud-based platform that interacts with electronic devices and participants in a related ecosystem of suppliers, content providers, service providers, and regulators to deliver value-added services to users of the intelligent cooking system, users of the hydrogen production system, and other participants of the ecosystem with wearable device integration is disclosed.

In embodiments, an intelligent cooking system having a recommendation engine for providing recommendations to users with wearable device integration is disclosed.

In embodiments, an intelligent cooking system having a notification engine for providing notifications to users with wearable device integration is disclosed.

In embodiments, an intelligent cooking system having an advertising engine for providing location-based offers to users with wearable device integration is disclosed.

In embodiments, an intelligent cooking system having interfaces that allow machine-to-machine or user-to-machine communication with other devices and the cloud, for contributing data for analytics, monitoring, control, and operation of other devices and systems with wearable device integration is disclosed.

In embodiments, an intelligent cooking system having a user interface that facilitates contextual and intelligence-driven personalized experience for computing devices that connect to a network based around the intelligent cooking system with wearable device integration is disclosed.

In embodiments, an intelligent cooking system having analytics for profiling, recording or analyzing users, usage of the device, maintenance and repair histories, patterns relating to patterns or faults, energy use patterns, cooking patterns, and deployment, use, and service of electrolyzer with wearable device integration is disclosed.

In embodiments, an intelligent cooking system having a commerce utility for ordering ingredients, components, and materials with wearable device integration is disclosed.

In embodiments, an intelligent cooking system having a cooking assistance utility for assisting users with cooking tasks with wearable device integration is disclosed.

In embodiments, an intelligent cooking system having a health utility for providing health indices for foods, nutritional information, nutritional search capabilities, nutritional assistance, and personalized suggestions and recommendations with wearable device integration is disclosed.

In embodiments, an intelligent cooking system having an infotainment utility for playing music, videos, and/or podcasts with wearable device integration is disclosed.

In embodiments, an intelligent cooking system having a broadcasting utility for enabling a personalized cooking channel that is broadcast from the cooking system with wearable device integration is disclosed.

In embodiments, an intelligent cooking system having a food investigation utility for gathering information from smart cooktops and user activity about recipes being used by users of the smart cooktop systems throughout a region with wearable device integration is disclosed.

In embodiments, a system for data collection in an industrial environment having an IoT platform with wearable device integration is disclosed.

In embodiments, a system for data collection in an industrial environment having an IoT data adapter for receiving data inputs and establishing a connection with one or more available IoT cloud platforms to publish the data with wearable device integration is disclosed.

In embodiments, a system for data collection in an industrial environment having a condition detector for detecting conditions related to connect attempts made by the IoT data adapter to one or more IoT cloud platforms with wearable device integration is disclosed.

In embodiments, a system for data collection in an industrial environment having an IoT data adapter with an adaptation engine with wearable device integration is disclosed.

In embodiments, a system for data collection in an industrial environment having the use of machine learning to prepare a data packet or stream with wearable device integration is disclosed.

In embodiments, a system for data collection in an industrial environment having a data marketplace that provides a pool of available cloud networking platforms with wearable device integration is disclosed.

In embodiments, a system for data collection in an industrial environment having a messaging utility that provides a cloud platform user interface with a message indicating the availability of a new data source and data source integration and usage instructions with wearable device integration is disclosed.

In embodiments, a system for data communication between nodes having the ability to maintain a first and second transmission limit based on received rate of arrival and success of delivery feedback messages, and limiting transmission of messages based on the transmission limits with wearable device integration is disclosed.

In embodiments, a system for data communication between nodes having the ability to limit transmission of further messages not yet acknowledged as successfully delivered according to the window size with wearable device integration is disclosed.

In embodiments, a system for data communication between nodes having the ability to maintain an estimate of a rate of loss events and use it to adjust the rate of redundancy messages with wearable device integration is disclosed.

In embodiments, a system for data communication between nodes having an estimated rate of loss events where the error correction code used to determine redundancy messages chosen is based on the estimated rate of loss events with wearable device integration is disclosed.

In embodiments, a system for data communication between nodes having the ability to apply forward error correction based on messages received describing channel characteristics with wearable device integration is disclosed.

In embodiments, a system for data communication between nodes having the ability to maintain/set timers based on occurrences of delivery order events and delaying transmission of feedback messages using timers with wearable device integration is disclosed.

In embodiments, a system for data communication between nodes having the ability to maintain/set timers based on occurrences of delivery order events and delaying modification of congestion window size based on timers with wearable device integration is disclosed.

In embodiments, a system for data communication between nodes having the ability to maintain/set timers based on occurrences of delivery order events, delaying modification of congestion window size based on timers, and cancelling modification of congestion window size when receiving a feedback message indicating successful delivery with wearable device integration is disclosed.

In embodiments, a system for data communication between nodes having the ability to configure a new connection using maintained data characterizing a current/previous connection with wearable device integration is disclosed.

In embodiments, a system for data communication between nodes having the ability to configure a new connection using maintained data characterizing an error rate of a current/previous connection with wearable device integration is disclosed.

In embodiments, a system for data communication between nodes having the ability to configure a new connection using maintained data characterizing a timing variability of a current/previous connection with wearable device integration is disclosed.

In embodiments, a system for data communication between nodes having the ability to configure a new connection using maintained data characterizing bandwidth of a current/previous connection with wearable device integration is disclosed.

In embodiments, a system for data communication between nodes having the ability to configure a new connection using maintained data characterizing round trip time of a current/previous connection with wearable device integration is disclosed.

In embodiments, a system for data communication between nodes having the ability to configure a new connection using maintained data characterizing communication control parameters of a current/previous connection with wearable device integration is disclosed.

In embodiments, a system for data communication between nodes having the ability to configure new connection using maintained data characterizing forward error correction parameters of a current/previous connection with wearable device integration is disclosed.

In embodiments, a system for data communication between nodes having a data store for maintaining data characterizing one or more current or previous data communication connections and a connection initiation module for initiating new data communication connections based on maintained data with wearable device integration is disclosed.

In embodiments, a system for data communication between nodes having the ability to transmit a first subset of data messages over a lower latency data path and a second subset of messages over a higher latency data path with wearable device integration is disclosed.

In embodiments, a system for data communication between nodes having the ability to transmit a first subset of data messages that are time critical over a lower latency data path and a second subset of messages over a higher latency data path with wearable device integration is disclosed.

In embodiments, a system for data communication between nodes having the ability to transmit a first initial subset of data messages over a lower latency data path and a second subset of messages that are subsequently available over a higher latency data path with wearable device integration is disclosed.

In embodiments, a system for data communication between nodes having the ability to transmit a first subset of acknowledgment messages over a lower latency data path and a second subset of data messages over a higher latency data path with wearable device integration is disclosed.

In embodiments, a system for data communication between nodes having the ability to transmit a first subset of supplemental/redundancy data messages over a lower latency data path and a second subset of data messages over a higher latency data path with wearable device integration is disclosed.

In embodiments, a system for data communication between nodes having a degree of redundancy associated with each message that is based on message position in the transmission order with wearable device integration is disclosed.

In embodiments, a system for data communication between nodes having a degree of redundancy associated with each message that increases as the position of the messages is non-decreasing with wearable device integration is disclosed.

In embodiments, a system for data communication between nodes having a degree of redundancy associated with each message that is based on message position in the transmission order and in response to receiving feedback messages with wearable device integration is disclosed.

In embodiments, a system for data communication between nodes having a degree of redundancy associated with each message that is based on message position in the transmission order and in response to receiving feedback messages, and adding or removing redundancy messages from the queue based on the feedback messages with wearable device integration is disclosed.

In embodiments, a system for data communication between nodes having the ability to adjust the number of messages sent over each of multiple different data paths with different communication protocols if it is determined that a data path is altering flow of messages with wearable device integration is disclosed.

In embodiments, a system for data communication between nodes having the ability to adjust the number of messages sent over each of multiple different data paths with different communication protocols if it is determined that a data path is altering flow of messages initial division based on previous communication connections with wearable device integration is disclosed.

In embodiments, a system for data communication between nodes having the ability to modify/add/remove redundancy information associated with encoded data as it travels from node to node via channels based on channel characteristics with wearable device integration is disclosed.

In embodiments, a system for data communication between nodes having the ability to send FEC packets at an estimated rate of loss events (isolated packet loss or burst of consecutive packets) with wearable device integration is disclosed.

In embodiments, a system for data communication between nodes having combined coding, TCP, and pacing of packet transmissions with wearable device integration is disclosed.

In embodiments, a system for data communication between nodes having a forward error correction code construction that interleaves groups of message packets and parity packets and has coding across overlapping groups of message packets with wearable device integration is disclosed.

In embodiments, a system for data communication between nodes having a variant of TCP that combines delay-based back-off with a stable window increase function with wearable device integration is disclosed.

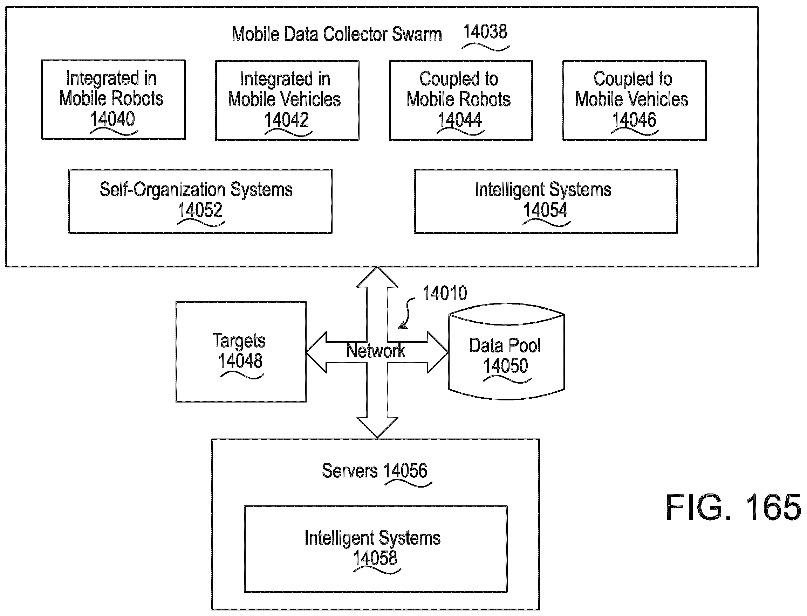

Systems and methods for using mobile robots and/or mobile vehicles for mobile data collection within an environment for industrial IoT data collection are next described with respect to FIGS. 165 to 167. Referring first to Figure 165, a data collection system may include one or more mobile robots and/or mobile vehicles configured to act as mobile data collectors within an environment for industrial IoT data collection. For example, the one or more mobile robots and/or mobile vehicles may transmit data to, receive data from, transmit commands to, receive commands from, be under the control of, communicate controls for, or otherwise communicate with the industrial IoT data collection, monitoring and control system 10. Methods and systems are disclosed herein for data collection using mobile robots and/or mobile vehicles, including a mobile robot with one or more mobile data collectors integrated therein, a mobile vehicle with one or more mobile data collectors integrated therein, a mobile robot with one or more mobile data collectors coupled thereto, and a mobile vehicle with one or more mobile data collectors coupled thereto. As used herein, the term "mobile robot" may refer to, but is not limited to, a robotic arm, android robot, small or large autonomous robot, remote-controlled robot, programmably configured robot, or other robotic mechanism. Examples of mobile robots within which a mobile data collector may be integrated or to which a mobile data collector may be coupled include, without limitation, any of the foregoing types of mobile robot. As used herein, the term "mobile vehicle" may refer to, but is not limited to, a heavy-duty machine (e.g., earthmoving equipment), heavy-duty on-road industrial vehicle, heavy-duty off-road industrial vehicle, industrial machine deployed in various settings (e.g., turbines, turbomachinery, generators, pumps, pulley systems, manifold, valve systems, and the like), earthmoving equipment, earth-compacting equipment, hauling equipment, hoisting equipment, conveying equipment, aggregate production equipment, equipment used in concrete construction, piledriving equipment, construction equipment (e.g., excavators, backhoes, loaders, bulldozers, skid steer loaders, trenchers, motor graders, motor scrapers, crawler loaders, wheeled loading shovels, dumpers, tankers, tippers, trailers, tunnel and handling equipment, road rollers, concrete mixers, hot mix plants, road making machines (e.g., compactors), stone crashers, pavers, slurry seal machines, spraying and plastering machines, heavy-duty pumps, and the like), material handling equipment (e.g., cranes, conveyors, forklift, hoists, and the like), personnel transport vehicles (e.g., cars, trucks, carts, watercraft, aircraft, and the like), unmanned vehicles (e.g., drones or other autonomous aircraft, autonomous watercraft, autonomous cars or trucks, and the like), other vehicles (e.g., regardless of size, purpose, or use of a motor), and the like. Examples of mobile vehicles within which a mobile data collector may be integrated or to which a mobile data collector may be coupled include, without limitation, any suitable mobile vehicle. Regardless of the particular form, a mobile robot or mobile vehicle according to this disclosure includes one or more mobile data collectors, which are or include sensors for recording state-related measurements of an environment for industrial IoT data collection. For example, the one or more sensors of a mobile data collector described in this disclosure can measure states with respect to equipment within an industrial IoT environment or with respect to the industrial IoT environment itself. Examples of mobile data collectors which may be integrated within and/or coupled to a mobile robot or a mobile vehicle include, without limitation, a mobile phone, a laptop computer, a tablet computer, a personal digital assistant, a walkie-talkie, a radio, a long or short range communication device, a flashlight, and the like. The sensors of a mobile data collector integrated within and/or coupled to a mobile robot or a mobile vehicle may measure one or more of vibrations, temperatures, electrical output, magnetic output, sound output, or other output of or otherwise relating to a target within the industrial IoT environment.

In embodiments, a mobile data collector swarm 14038 includes a number of mobile robots and/or mobile vehicles. The mobile robots and/or mobile vehicles of the swarm 14038 may be mobile robots and/or mobile vehicles native to the industrial IoT environment or mobile robots and/or mobile vehicles brought into the industrial IoT environment from a different location. As shown in Figure 165, the swarm 14038 may include different types of mobile robots and/or mobile vehicles, including a mobile robot with one or more mobile data collectors integrated therein 14040, a mobile vehicle with one or more mobile data collectors integrated therein 14042, a mobile robot with one or more mobile data collectors coupled thereto 14044, and a mobile vehicle with one or more mobile data collectors coupled thereto 14046. In embodiments, a mobile data collector is integrated within a mobile robot or mobile vehicle when removal of the mobile data collector from the mobile robot or mobile vehicle during the typical operation of the mobile robot or mobile vehicle would result in disruption to the principle operation of the mobile robot or mobile vehicle. In embodiments, a mobile data collector is coupled to a mobile robot or mobile vehicle when the mobile data collector is able to be removed or otherwise uncoupled from the mobile robot or mobile vehicle without material disruption to the principle operation of the mobile robot or mobile vehicle.

The mobile robots and mobile vehicles of the mobile data collector swarm 14038 collect data from targets 14048 (e.g., the targets 12002 shown in Figure 118, or any other suitable target). In embodiments, data collected by the mobile data collectors from the targets 14048 can be stored in a data pool 14050 (e.g., the data pool 14012 shown in FIG. 161, or any other suitable data pool). For example, the targets 14048 may be or include one or more of machines, pipelines, equipment, installations, tools, vehicles, turbines, speakers, lasers, automatons, computer equipment, industrial equipment, switches, and the like.

Different mobile robots and/or mobile vehicles of the swarm 14038 may be configured to record certain types of state-related measurements of some or all of the targets 14048. For example, some of the mobile robots and/or the mobile vehicles of the swarm 14038 may be configured to record state-related measurements based on vibrations measured with respect to some or all of the targets 14048. In another example, some of the mobile robots and/or the mobile vehicles of the swarm 14038 may be configured to record state-related measurements based on temperatures measured with respect to some or all of the targets 14048. In another example, some of the mobile robots and/or the mobile vehicles of the swarm 14038 may be configured to record state-related measurements based on electrical or magnetic outputs measured with respect to some or all of the targets 14048. In another example, some of the mobile robots and/or the mobile vehicles of the swarm 14038 may be configured to record state-related measurements based on sound outputs measured with respect to some or all of the targets 14048. In another example, some of the mobile robots and/or the mobile vehicles of the swarm 14038 may be configured to record state-related measurements based on outputs other than vibrations, temperatures, electrical or magnetic, or sound, as measured with respect to some or all of the targets 14048.

Alternatively, or additionally, different mobile robots and/or mobile vehicles of the swarm 14038 may be configured to record some or all state-related measurements of certain types of the targets 14048. For example, some of the mobile robots and/or the mobile vehicles of the swarm 14038 may be configured to record some or all state-related measurements from agitators (e.g., turbine agitators), airframe control surface vibration devices, catalytic reactors, compressors, and the like. In another example, some of the mobile robots and/or the mobile vehicles of the swarm 14038 may be configured to record some or all state-related measurements from conveyors and lifters, disposal systems, drive trains, fans, irrigation systems, motors, and the like. In another example, some of the mobile robots and/or the mobile vehicles of the swarm 14038 may be configured to record some or all state-related measurements from pipelines, electric powertrains, production platforms, pumps (e.g., water pumps), robotic assembly systems, thermic heating systems, tracks, transmission systems, turbines, and the like. In embodiments, the mobile robots and/or the mobile vehicles of the swarm 14038 may be configured to record some or all state-related measurements of certain types of industrial environments. For example, an industrial environment having targets with states measured using the mobile robots and/or the mobile vehicles of the swarm 14038 may include, but is not limited to, a manufacturing environment, a fossil fuel energy production environment, an aerospace environment, a mining environment, a construction environment, a ship environment, a shipping environment, a submarine environment, a wind energy production environment, a hydroelectric energy production environment, a nuclear energy production environment, an oil drilling environment, an oil pipeline environment, any other suitable energy product environment, any other suitable energy routing or transmission environment, any other suitable industrial environment, a factory, an airplane or other aircraft, a distribution environment, an energy source extraction environment, an offshore exploration site, an underwater exploration site, an assembly line, a warehouse, a power generation environment, a hazardous waste environment, and the like.

The swarm 14038 includes self-organization systems 14052 for causing the mobile robots or mobile vehicles within the swarm 14038 to self-organize (e.g., during data collection operations within the industrial IoT environment). In embodiments, a data collection system that includes the swarm 14038 (e.g., the data collection system 12004 or any other suitable data collection system) may include self-organization functionality, which can be performed at or by any of the components of the data collection system. In embodiments, a mobile robot or mobile vehicle of the swarm 14038 can self-organize without assistance from other components and based on, for example, the data sensed by its associated sensors and other knowledge. In embodiments, the network 14010 can be accessed for the self-organization without assistance from other components and based on, for example, the data sensed by the mobile robots and/or mobile vehicles, or other knowledge. It should be appreciated that any combination or hybrid-type self-organization system can also be embodied. For example, the data collection system can perform or enable various methods or systems for data collection having self-organization functionality in an industrial IoT environment. These methods and systems can include analyzing a plurality of sensor inputs, for example, received from or sensed by sensors at the mobile robots and/or at the mobile vehicles of the swarm 14038. The methods and systems can also include sampling the received data and self-organizing at least one of: (i) a storage operation of the data (e.g., with respect to the data pool 14050); (ii) a collection operation of sensors that provide the plurality of sensor inputs, and (iii) a selection operation of the plurality of sensor inputs.

In embodiments, the self-organization systems 14052 can be used to collectively organize two or more of the mobile robots and/or the mobile vehicles of the swarm 14038. Alternatively, the self-organization systems 14052 can be used to organize individual mobile robots and/or the mobile vehicles of the swarm 14038. For example, the self-organization systems 14052 can control the traversal of each of the mobile robots and each of the mobile vehicles of the swarm 14038 within different regions, sections, or other divided areas of the industrial IoT environment. In embodiments, there may be other mobile robots with one or more mobile data collectors integrated therein, other mobile vehicles with one or more mobile data collectors integrated therein, other mobile robots with one or more mobile data collectors coupled thereto, and/or other mobile vehicles with one or more mobile data collectors coupled thereto, which collect data for some or all of the targets 14048, but which are not included in the swarm 14038. Such other mobile robots and/or other mobile vehicles may be controlled individually (e.g., outside of the self-organization systems 14052).

In embodiments, the swarm 14038 may include intelligent systems 14054 that process the state-related measurements recorded using the mobile robots and/or the mobile vehicles of the swarm 14038 before transmitting those recorded state-related measurements over the network 14010 or any other suitable communication mechanism. For example, some or all of the mobile robots and/or the mobile vehicles of the swarm 14038 may integrate artificial intelligence processes, machine learning processes, and/or other cognitive processes for analyzing the state-related measurements recorded thereby. In embodiments, the processing by the intelligent systems 14054 of the mobile robots and/or the mobile vehicles of the swarm 14038 may be or be represented within a pre-processing step of the industrial IoT data collection, monitoring and control system 10. For example, certain types of the mobile robots and/or the mobile vehicles of the swarm 14038 may selectively perform pre-processing of the recorded state-related measurements to identify redundant information, irrelevant information, or insignificant information. In another example, certain types of the mobile robots and/or the mobile vehicles of the swarm 14038 may pre-process the recorded state-related measurements in an automated manner, so as to identify redundant information, irrelevant information, or insignificant information. In another example, the pre-processing may be selectively performed for certain types of state-related measurements recorded by any of the mobile robots and/or the mobile vehicles of the swarm 14038 to pre-process the recorded state-related measurements (e.g., to identify redundant information, irrelevant information, or insignificant information). In another example, the pre-processing may be automated for certain types of state-related measurements recorded by any of the mobile robots and/or the mobile vehicles of the swarm 14038 to pre-process the recorded state-related measurements (e.g., to identify redundant information, irrelevant information, or insignificant information).

In embodiments, the state-related measurements recorded using the mobile robots and/or the mobile vehicles of the swarm 14038 may be made available over the network 14010 (e.g., as described with respect to Figure 307) without the need for external networks. The network 14010 may be a MANET (e.g., the MANET 20 shown in Figure. 2 or any other suitable MANET), the Internet (e.g., the Internet 110 shown in Figure 3 or any other suitable Internet), or any other suitable type of network, or any combination thereof. For example, the network 14010 may be used to receive state-related measurements recorded using the mobile robots and/or the mobile vehicles of the swarm 14038. The network 14010 may then be used to transmit some or all of those received state-related measurements to other components of the data collection system 102. For example, the network 14010 may be used to transmit some or all of the received state-related measurements to the data pool 14050 (e.g., the data pool 60 shown in Figure 2 or any other suitable data pool) for storage of those received state-related measurements. In another example, the network 14010 may be used to transmit some or all of the received state-related measurements to servers 14056 of the environment for industrial IoT data collection (e.g., the servers 14014 shown in Figure 161, or any other suitable server). The servers 14056 may include one or more hardware or software server aspects. For example, the servers 14056 to which the received state-related measurements are transmitted may include intelligent systems 14058 for processing the received state-related measurements. The intelligent systems 14058 may process the received state-related measurements using artificial intelligence processes, machine learning processes, and/or other cognitive processes to identify information within or otherwise associated with the received state-related measurements. In embodiments, after processing the received state-related measurements, the servers 14056 to which the received state-related measurements are transmitted may transmit the processed information or data indicative of the processed information to other systems (e.g., for storage or analysis). In embodiments, the data indicative of the processed information from the servers 14056 may include, for example, output or other results of the artificial intelligence processes, machine learning processes, and/or other cognitive processes.

In embodiments, a mobile robot or a mobile vehicle of the swarm 14038 may include a computer vision system or otherwise include computer vision functionality. For example, computer vision functionality of the mobile robot or of the mobile vehicle can include hardware and software configured to identify objects in a multi-axial space using image sensing. In embodiments, the computer vision functionality within the mobile robot or within the mobile vehicle can include functionality for observing visible states of the targets 14048 during the normal operation of the mobile robot or the mobile vehicle. In embodiments, data processed by the computer vision functionality of the mobile robot or of the mobile vehicle can be input to the intelligent systems 14054 (e.g., for further processing and learning of the targets 14048 and/or of the environment that includes the targets 14048).

In embodiments, some or all of the mobile robots and/or the mobile vehicles of the swarm 14038 may include sensor fusion functionality. For example, the sensor fusion functionality may be embodied as the on-device sensor fusion 80. For example, state-related measurements recorded using multiple analog sensors of one or more of the mobile robots and/or the mobile vehicles of the swarm 14038 (e.g., the multiple analog sensors 82 shown in Figure 4 or any other suitable sensor) may be locally or remotely processed using artificial intelligence processes, machine learning processes, and/or other cognitive processes, which may be embodied within the mobile robots and/or the mobile vehicles of the swarm 14038 themselves, the servers 14056, or both. In embodiments, the sensor fusion functionality may be embodied by a pre-processing step that is performed prior to the artificial intelligence processes, machine learning processes, and/or other cognitive processes. In embodiments, the sensor fusion functionality may be performed using a MUX. For example, each of the mobile robots and/or the mobile vehicles of the swarm 14038 may include its own MUX for combining state-related measurements recorded using individual sensors of those multiple sensors. In some such embodiments, the MUX may be internal to the mobile robots and/or the mobile vehicles of the swarm 14038. In some such embodiments, the MUX may be external to the mobile robots and/or the mobile vehicles of the swarm 14038.

In embodiments, the state-related measurements recorded using the mobile robots and/or the mobile vehicles of the swarm 14038 may be pulled from the mobile robots and/or mobile vehicles by an upstream device (e.g., a client device or other software or hardware aspect used to review, analyze, or otherwise view the state-related measurements). For example, the mobile robots and/or the mobile vehicles of the swarm 14038 may not actively transmit the state-related measurements that are received (e.g., at the servers 14056, the data pool 14050, or any other suitable hardware or software component that receives the state-related measurements recorded using the mobile robots and/or the mobile vehicles of the swarm 14038). Rather, the transmission of the state-related measurements from the mobile robots and/or the mobile vehicles of the swarm 14038 may be caused by commands received at the mobile robots and/or the mobile vehicles of the swarm 14038 (e.g., from servers 14056 or from other hardware or software of the data collection system 102). For example, a data collector of any of the mobile robots and/or the mobile vehicles of the swarm 14038 may be configured to pull state-related measurements recorded using that mobile robot or mobile vehicle. For example, the mobile robots and/or the mobile vehicles of the swarm 14038 may continuously, periodically, or otherwise at multiple times record state-related measurements within the environment for industrial IoT data collection. The data collector may, at fixed intervals, at random times, or otherwise, transmit one or more commands to some or all of the mobile robots and/or the mobile vehicles of the swarm 14038, for example, to pull some or all of the state-related measurements recorded using the mobile robots and/or the mobile vehicles of the swarm 14038 since the last time state-related measurements were pulled therefrom. In another example, the commands, when processed using individual mobile robots and/or the mobile vehicles of the swarm 14038, cause the recorded state-related measurements or data representative thereof to be transmitted from the mobile robots and/or the mobile vehicles of the swarm 14038.

In embodiments, the state-related measurements recorded using the mobile robots and/or the mobile vehicles of the swarm 14038 may be transmitted from the mobile robots and/or the mobile vehicles of the swarm 14038 responsive to requests for those state-related measurements. For example, the self-organization systems 14052 may, at fixed intervals, at random times, or otherwise, transmit a request for recorded state-related measurements to some or all of the mobile robots and/or the mobile vehicles of the swarm 14038. The processors of some or all of the mobile robots and/or the mobile vehicles of the swarm 14038 to which the request is sent may process the request to determine which state-related measurements to transmit. For example, data indicative of a time of a most recent request for recorded state-related measurements may be accessed by those processors. The processors may then compare that time to a time at which the new request is received from the self-organization systems 14052. The processors may then query a data store for state-related measurements recorded between the two times. The processors may then transmit those state-related measurements in response to the request. In another example, the processors may identify a most recent set of state-related measurements recorded using the corresponding mobile robots and/or the mobile vehicles of the swarm 14038 and transmit those state-related measurements in response to the request. In another example, data collectors within the data collection system 10 may transmit the request directly to the mobile robots and/or the mobile vehicles of the swarm 14038. In yet another example, the mobile robots and/or the mobile vehicles of the swarm 14038 may transmit the request to the self-organization systems 14052. The self-organization systems 14052 may process the request to determine select individual mobile robots and/or the mobile vehicles of the swarm 14038 which were used to record the requested state-related measurements. In embodiments, the collective processing mind 14020 may then transmit certain state-related measurements in response to the request by, for example, querying a storage for some or all of the state-related measurements recorded using those select individual mobile robots and/or the mobile vehicles of the swarm 14038. Alternatively, the self-organization systems 14052 may process the request to determine which of the state-related measurements recorded by some or all of the mobile robots and/or the mobile vehicles of the swarm 14038 to transmit in response to the request (e.g., based on a time of the request). For example, the self-organization systems 14052 can compare the time of the request to a time of a most recent request for recorded state-related measurements. The self-organization systems 14052 can then retrieve the state-related measurements recorded in between those times and transmit the retrieved state-related measurements in response to the request.

In embodiments, the state-related measurements recorded using the mobile robots and/or the mobile vehicles of the swarm 14038 may be pushed to an upstream device (e.g., a client device or other software or hardware aspect used to review, analyze, or otherwise view the state-related measurements). For example, the mobile robots and/or the mobile vehicles of the swarm 14038 may actively transmit the state-related measurements that are received (e.g., at the servers 14056, the data pool 14050, or any other suitable hardware or software component that receives the state-related measurements recorded using the mobile robots and/or the mobile vehicles of the swarm 14038), without such receiving hardware or software component requesting those state-related measurements or otherwise causing the mobile robot or the mobile vehicle to transmit those state-related measurements based on a command. For example, some or all of the mobile robots and/or the mobile vehicles of the swarm 14038 may transmit state-related measurements on a fixed interval, at random times, immediately upon the recording of those state-related measurements, some amount of time after recording those measurements, upon a determination that a threshold number of state-related measurements have been recorded, or at other suitable times. In some such embodiments, the mobile robots and/or the mobile vehicles of the swarm 14038, either by themselves or using the self-organization systems 14052, may push the recorded state-related measurements in response to detecting a near proximity of a data collection router 14062.

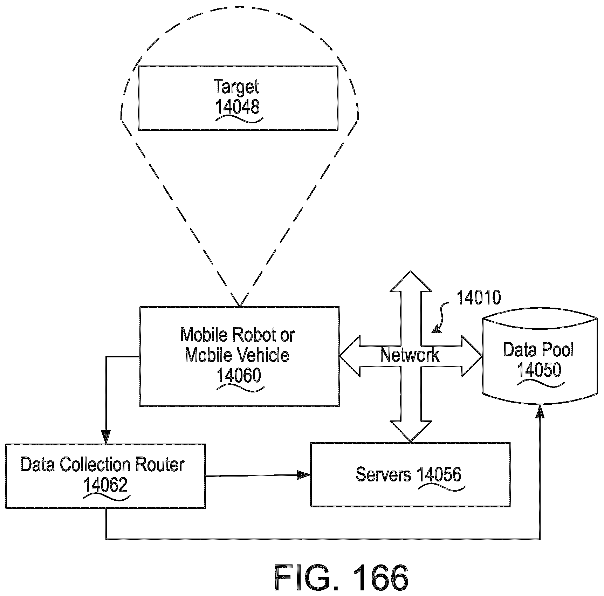

For example, referring next to Figure 166, upon the detection of the target 14048 by a mobile robot or mobile vehicle 14060 (e.g., one or more of the mobile robot with one or more mobile data collectors integrated therein 14040, the mobile vehicle with one or more mobile data collectors integrated therein 14042, the mobile robot with one or more mobile data collectors coupled thereto 14044, or the mobile vehicle with one or more of the mobile data collectors coupled thereto 14046 of the swarm 14038), the mobile robot or mobile vehicle 14060 records state-related measurements of the target 14048 (e.g., vibrations, temperature, electrical or magnetic output, sound output, or the like). The recorded state-related measurements can be transmitted over the network 14010 (e.g., to the data pool 14050, the servers 14056, or another hardware or software component). Alternatively, the recorded state-related measurements can be transmitted to the data collection router 14062, for example, where the network 14010 is unavailable or where the data collection router 14062 is configured to receive and/or pre-process the recorded state-related measurements from the mobile robot or mobile vehicle 14060. The data collection router 14062 may be one of a number of data collection routers 14062 located throughout the environment for industrial IoT data collection. For example, the data collection router 14062 may be a data collection router 14062 configured to transmit state-related measurements specifically recorded for the target 14048.

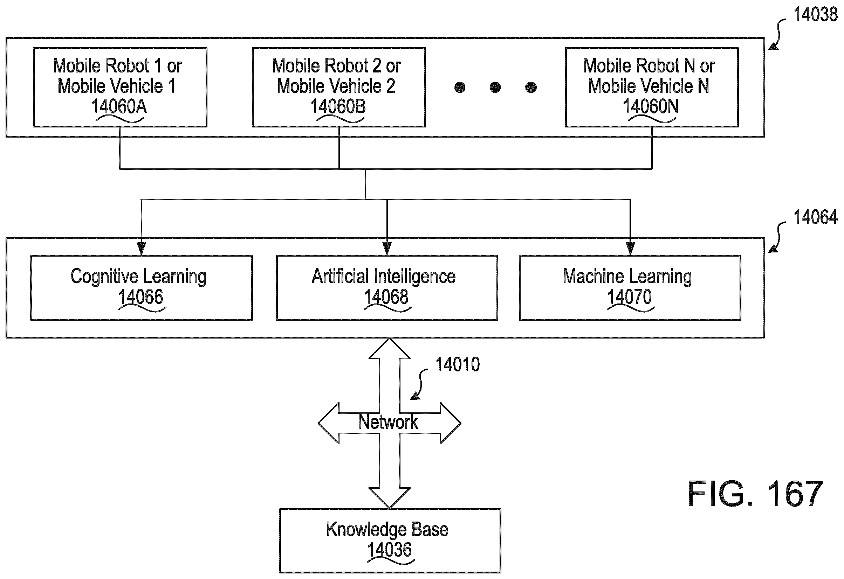

Referring next to Figure 167, various aspects of functionality of intelligent systems 14064 used to process output of the mobile robots and/or the mobile vehicles of the swarm 14038 are disclosed. In embodiments, the intelligent systems 14064 may include a cognitive learning module 14066, an artificial intelligence module 14068, and a machine learning module 14070. The intelligent systems 14064 may include additional or fewer modules. The intelligent systems 14064 may, for example, be the intelligent systems 14054 or the intelligent systems 14058 shown in Figure 165 or any other suitable intelligent systems. Although shown as separate modules, in embodiments, there may be overlap between some or all of the cognitive learning module 14066, the artificial intelligence module 14068, and the machine learning module 14070. For example, the artificial intelligence module 14068 may include the machine learning module 14070. In another example, the cognitive learning module 14066 may include the artificial intelligence module 14068 (and, in embodiments, therefore, the machine learning module 14070). The swarm 14038 may include any number of mobile robots and/or mobile vehicles. For example, as shown, the swarm 14038 includes a first mobile robot or first mobile vehicle 14060A, a second mobile robot or second mobile vehicle 14060B, and an Nth mobile robot or Nth mobile vehicle 14060N, where N is a number greater than two. The intelligent systems 14064 receives the output of the mobile robots or mobile vehicles 14060A, 14060B, ... 14060N. In particular, one or more of the modules 14066, 14068, and 14070 of the intelligent systems 14064 receives data generated by and output from one or more of the mobile robots or mobile vehicles 14060A, 14060B, ... 14060N. The output from the mobile robots or mobile vehicles 14060A, 14060B, ... 14060N may, for example, include state-related measurements recorded using the mobile robots or mobile vehicles 14060A, 14060B, ... 14060N, (e.g., state-related measurements of equipment within an environment for industrial IoT data collection). In embodiments, the output from the mobile robots or mobile vehicles 14060A, 14060B, ... 14060N may be processed by all three of the modules 14066, 14068, and 14070 of the intelligent systems 14064. In embodiments, the output from the mobile robots or mobile vehicles 14060A, 14060B, ... 14060N may be processed by only one of the modules 14066, 14068, and 14070 of the intelligent systems 14064. For example, the particular one of the modules 14066, 14068, and 14070 of the intelligent systems 14064 to use to process the output from the mobile robots or mobile vehicles 14060A, 14060B, ... 14060N may be selected based on the mobile robot and/or mobile vehicle used to generate that output, the equipment measured in generating that output, the values of the output, other selection criteria, and the like.

The knowledge base 14036 (e.g., as described with respect to Figure 164) may be updated based on output from the intelligent systems 14064. The knowledge base 14036 represents a library or other set or collection of knowledge related to the environment of the industrial IoT data collection, including equipment within that environment, tasks performed within that environment, personnel having the skill to perform tasks within that environment, and the like. The intelligent systems 14064 can process the state-related measurements recorded using the mobile robots or mobile vehicles 14060A, 14060B, ... 14060N to facilitate knowledge gathering for expanding the knowledge base 14036. For example, the modules 14066, 14068, and 14070 of the intelligent systems 14064 can process those state-related measurements against existing knowledge within the knowledge base 14036 to update or otherwise modify information within the knowledge base 14036. The intelligent systems 14064 may use intelligence and machine learning capabilities (e.g., of the machine learning module 14070 or as described elsewhere in this disclosure) to process state-related measurements and related information based on detected conditions (e.g., conditions informed by the mobile robots and/or mobile vehicles of the swarm 14038 and/or provided as training data) and/or state information (e.g., state information determined by a machine state recognition system that may determine a state, for example, relating to an operational state, an environmental state, a state within a known process or workflow, a state involving a fault or diagnostic condition, and the like). This may include optimization of input selection and configuration based on learning feedback from the learning feedback system, which may include providing training data (e.g., from a host processing system or from other data collection systems either directly or from the host processing system) and may include providing feedback metrics (e.g., success metrics calculated within an analytic system of the host processing system). Examples of learning feedback systems, data collection systems, and analytic systems are described elsewhere in this disclosure. Thus, the intelligent systems 14064 can be used to update workflows of tasks assigned and performed within the industrial IoT environment based on output from the mobile robots or mobile vehicles 14060A, 14060B, ... 14060N.

In embodiments, the intelligent systems 14064, either within one of the modules 14066, 14068, and 14070 or otherwise, may include other intelligence or machine learning aspects. For example, the intelligent systems 14064 may include one or more of a YOLO neural network, a YOLO CNN, a set of neural networks configured to operate on or from a FPGA, a set of neural networks configured to operate on or from a FPGA and GPU hybrid component, a user configurable series and parallel flow for a hybrid neural network (e.g., configuring series and/or parallel flows between neural networks as outputs which can be communicated between such neural networks), a machine learning system for automatically configuring a topology or workflow for a set of hybrid neural networks (e.g., series, parallel, data flows, etc.) based on a training data set which may or may not use manual configurations (e.g., by a human user), a deep learning system for automatically configuring a topology or workflow for a set of hybrid neural networks (e.g., series, parallel, data flows, etc.) based on a training data set of outcomes from industrial IoT processes (e.g., maintenance, repair, service, prediction of faults, optimization of operation of a machine, system of facility, etc.), or other intelligence or machine learning aspects.

Thus, in embodiments, the output of the mobile robots and/or mobile vehicles of the swarm 14038 may be processed using the intelligent systems 14054 to add to, remove from, or otherwise modify the knowledge base 14036. For example, the knowledge base 14036 may reflect information to use to perform one or more tasks within the industrial environment in which the targets are located and in which the mobile robots and/or mobile vehicles of the swarm 14038 are used. The output from the mobile robots and/or mobile vehicles of the swarm 14038 can thus be used to increase knowledge as to the nature of issues that arise with respect to the industrial environment, for example, by describing information about the target from which measurements were recorded, a time and/or date at which the measurements were recorded, pre-existing state or other condition information about the target, information about the time required to resolve an issue with respect to a target, information about how to resolve an issue with respect to a target, information indicating an amount of downtime to the target and to other aspects of the respective industrial environment resulting from resolving the issue, an indication of whether the issue should be resolved now or later (or not at all), and the like. The intelligent systems 14054 may process that output to update existing training data. For example, the existing training data can be used to update the machine learning, artificial intelligence, and/or other cognitive functionality for identifying states of targets based on the output of the mobile robots and/or mobile vehicles of the swarm 14038.

For example, the knowledge base 14036 may include a series of databases or other tables or graphs arranged hierarchically based on the target or the area of the industrial environment that includes the target. For example, a first layer of the knowledge base 14036 may refer to the industrial environment (e.g., a power plant, a manufacturing facility, a mining facility, etc.). A second layer of the knowledge base 14036 may refer to zones within the industrial environment (e.g., zone 1, zone 2, etc., or named zones, as the case may be). A third layer of the knowledge base 14036 may refer to targets within those zones (e.g., within a first zone of a power plant including electrical equipment, this could include alternators, circuit breakers, transformers, batteries, exciters, etc., and, within a second zone of a power plant including a turbine, a generator, a generator magnet, etc.). The knowledge base 14036 may be updated based on output of the intelligent systems 14054, by manual user data entry, or both.

For example, the mobile robots and/or mobile vehicles of the swarm 14038 may be deployed to monitor or otherwise traverse different locations (e.g., zones) within a mining facility used to mine and/or process fuel materials (e.g., coal, natural gas, etc.) and/or non-fuel materials (e.g., stone, sand, gravel, gold, silver, etc.). A mobile robot may be deployed to traverse a first zone in which mineral crushing machinery is operating, and a mobile vehicle may be deployed to traverse a second zone in which underground mining equipment is operating. The mobile robot may measure the operating temperatures of the mineral crushing machinery within the first zone, the temperature of areas of the first zone around the mineral crushing machinery, and the like. The mobile robot may further measure the sound output from the mineral crushing machinery, for example, by recording measurements of the sound output from some or all of the machinery. The mobile robot can detect an overheating issue with respect to one of the mineral crushing machines if it records a temperature measurement which, when processed by the intelligent systems 14054 against the data stored in the knowledge base 14036, indicates that the temperature is at a dangerous level. The mobile robot may be instructed to remain at the location of that machine and record new temperature measurements over some period of time (e.g., at fixed intervals or otherwise) to determine whether the machine is actually operating at a dangerously high temperature. If the intelligent systems 14054 detects that the initial high temperature measurement was not representative of the operating temperature of the machine, the intelligent systems 14054 may either not update the knowledge base 14036 to reflect the misrepresentative measurement or instead may update the knowledge base 14036 to reflect that such a temperature reading may not represent a dangerous condition.

The mobile vehicle may measure vibrational output with respect to the underground mining equipment. The output of the mobile vehicle may be processed using the intelligent systems 14054 to determine whether it is consistent with the data within the knowledge base 14036 or is deviant therefrom. In the event the output of the mobile vehicle deviates from the data within the knowledge base, the intelligent systems 14054 can update the data within that portion of the knowledge base 14036 to reflect the output of the mobile vehicle. The intelligent systems 14054 may also or instead cause the mobile vehicle to emit an alarm (e.g., using lights, sounds, or both) to warn personnel located in that zone. For example, the intelligent systems 14054 may retrieve information from the knowledge base 14036 suggesting that the output of the mobile vehicle reflects a dangerous condition, for example, related to a potential underground cave-in. In some scenarios, the intelligent systems 14054 may transmit a notification directly to an operator of the underground machinery to alert them to the dangerous condition.

Disclosed herein are systems for using a mobile robot and/or a mobile vehicle for data collection in an industrial environment. As used herein, using a mobile robot and/or a mobile vehicle refers to using a mobile robot and/or a mobile vehicle for specific or general purposes. For example, using a mobile robot and/or a mobile vehicle as described with respect to the functionality or configuration of a system refers to the use by that system of the mobile robots and/or mobile vehicles of the swarm 14038 and/or the hardware and/or software used in connection with the mobile robots and/or mobile vehicles of the swarm 14038 for data collection within an industrial IoT environment, as shown in FIGS. 165 to 167. Such use of a mobile robot and/or a mobile vehicle refers to the use of one or more of the mobile robots and/or mobile vehicles of the swarm 14038. For example, a system disclosed herein as using a mobile robot and/or a mobile vehicle may use one or more of a robotic arm, android robot, small or large autonomous robot, remote-controlled robot, programmably configured robot, other robotic mechanism, heavy-duty machine (e.g., earth-moving equipment), heavy-duty on-road industrial vehicle, heavy-duty off-road industrial vehicle, industrial machine deployed in various settings (e.g., turbines, turbomachinery, generators, pumps, pulley systems, manifold, valve systems, and the like), earth-moving equipment, earth-compacting equipment, hauling equipment, hoisting equipment, conveying equipment, aggregate production equipment, equipment used in concrete construction, piledriving equipment, construction equipment (e.g., excavators, backhoes, loaders, bulldozers, skid steer loaders, trenchers, motor graders, motor scrapers, crawler loaders, wheeled loading shovels, dumpers, tankers, tippers, trailers, tunnel and handling equipment, road rollers, concrete mixers, hot mix plants, road making machines (e.g., compactors), stone crashers, pavers, slurry seal machines, spraying and plastering machines, heavy-duty pumps, and the like), material handling equipment (e.g., cranes, conveyors, forklift, hoists, and the like), personnel transport vehicles (e.g., cars, trucks, carts, watercraft, aircraft, and the like), unmanned vehicles (e.g., drones or other autonomous aircraft, autonomous watercraft, autonomous cars or trucks, and the like), other vehicles (e.g., regardless of size, purpose, or use of a motor), and the like.

In embodiments, a system for using a mobile robot and/or mobile vehicle for mobile data collection in an industrial environment having the use of an analog cross point switch for collecting variable groups of analog sensor inputs with wearable device integration is disclosed.

In embodiments, a system for using a mobile robot and/or mobile vehicle for mobile data collection in an industrial environment having IP front signal conditioning on a multiplexer for improved signal-to-noise ratio with wearable device integration is disclosed.

In embodiments, a system for using a mobile robot and/or mobile vehicle for mobile data collection in an industrial environment having multiplexer continuous monitoring alarming features with wearable device integration is disclosed.

In embodiments, system for using a mobile robot and/or mobile vehicle for mobile data collection in an industrial environment having the use of distributed CPLD chips with dedicated bus for logic control of multiple MUX and data acquisition sections with wearable device integration is disclosed.

In embodiments, a system for using a mobile robot and/or mobile vehicle for mobile data collection in an industrial environment having high-amperage input capability using solid state relays and design topology with wearable device integration is disclosed.

In embodiments, system for using a mobile robot and/or mobile vehicle for mobile data collection in an industrial environment having power-down ability of at least one of an analog sensor channel and a component board with wearable device integration is disclosed.

In embodiments, a system for using a mobile robot and/or mobile vehicle for mobile data collection in an industrial environment having unique electrostatic protection for trigger and vibration inputs with wearable device integration is disclosed.

In embodiments, a system for using a mobile robot and/or mobile vehicle for mobile data collection in an industrial environment having precise voltage reference for A/D zero reference with wearable device integration is disclosed.

In embodiments, a system for using a mobile robot and/or mobile vehicle for mobile data collection in an industrial environment having a phase-lock loop band-pass tracking filter for obtaining slow-speed RPMs and phase information with wearable device integration is disclosed.

In embodiments, a system for using a mobile robot and/or mobile vehicle for mobile data collection in an industrial environment having digital derivation of phase relative to input and trigger channels using on-board timers with wearable device integration is disclosed.

In embodiments, a system for using a mobile robot and/or mobile vehicle for mobile data collection in an industrial environment having a peak-detector for auto-scaling that is routed into a separate analog-to-digital converter for peak detection with wearable device integration is disclosed.

In embodiments, a system for using a mobile robot and/or mobile vehicle for mobile data collection in an industrial environment having routing of a trigger channel that is either raw or buffered into other analog channels with wearable device integration is disclosed.

In embodiments, a system for using a mobile robot and/or mobile vehicle for mobile data collection in an industrial environment having the use of higher input oversampling for delta-sigma A/D for lower sampling rate outputs to minimize AA filter requirements with wearable device integration is disclosed.

In embodiments, a system for using a mobile robot and/or mobile vehicle for mobile data collection in an industrial environment having the use of a CPLD as a clock-divider for a delta-sigma analog-to-digital converter to achieve lower sampling rates without the need for digital resampling with wearable device integration is disclosed.

In embodiments, a system for using a mobile robot and/or mobile vehicle for mobile data collection in an industrial environment having long blocks of data at a high-sampling rate as opposed to multiple sets of data taken at different sampling rates with wearable device integration is disclosed.

In embodiments, a system for using a mobile robot and/or mobile vehicle for mobile data collection in an industrial environment having storage of calibration data with maintenance history on-board card set with wearable device integration is disclosed.

In embodiments, a system for using a mobile robot and/or mobile vehicle for mobile data collection in an industrial environment having a rapid route creation capability using hierarchical templates with wearable device integration is disclosed.

In embodiments, a system for using a mobile robot and/or mobile vehicle for mobile data collection in an industrial environment having intelligent management of data collection bands with wearable device integration is disclosed.

In embodiments, a system for using a mobile robot and/or mobile vehicle for mobile data collection in an industrial environment having a neural net expert system using intelligent management of data collection bands with wearable device integration is disclosed.

In embodiments, a system for using a mobile robot and/or mobile vehicle for mobile data collection in an industrial environment having use of a database hierarchy in sensor data analysis with wearable device integration is disclosed.

In embodiments, a system for using a mobile robot and/or mobile vehicle for mobile data collection in an industrial environment having an expert system GUI graphical approach to defining intelligent data collection bands and diagnoses for the expert system with wearable device integration is disclosed.

In embodiments, a system for using a mobile robot and/or mobile vehicle for mobile data collection in an industrial environment having a graphical approach for back-calculation definition with wearable device integration is disclosed.

In embodiments, a system for using a mobile robot and/or mobile vehicle for mobile data collection in an industrial environment having proposed bearing analysis methods with wearable device integration is disclosed.

In embodiments, a system for using a mobile robot and/or mobile vehicle for mobile data collection in an industrial environment having torsional vibration detection/analysis utilizing transitory signal analysis with wearable device integration is disclosed.

In embodiments, a system for using a mobile robot and/or mobile vehicle for mobile data collection in an industrial environment having improved integration using both analog and digital methods with wearable device integration is disclosed.

In embodiments, a system for using a mobile robot and/or mobile vehicle for mobile data collection in an industrial environment having adaptive scheduling techniques for continuous monitoring of analog data in a local environment with wearable device integration is disclosed.

In embodiments, a system for using a mobile robot and/or mobile vehicle for mobile data collection in an industrial environment having data acquisition parking features with wearable device integration is disclosed.

In embodiments, a system for using a mobile robot and/or mobile vehicle for mobile data collection in an industrial environment having a self-sufficient data acquisition box with wearable device integration is disclosed.

In embodiments, a system for using a mobile robot and/or mobile vehicle for mobile data collection in an industrial environment having SD card storage with wearable device integration is disclosed.

In embodiments, a system for using a mobile robot and/or mobile vehicle for mobile data collection in an industrial environment having extended onboard statistical capabilities for continuous monitoring with wearable device integration is disclosed.

In embodiments, a system for using a mobile robot and/or mobile vehicle for mobile data collection in an industrial environment having the use of ambient, local and vibration noise for prediction with wearable device integration is disclosed.

In embodiments, a system for using a mobile robot and/or mobile vehicle for mobile data collection in an industrial environment having smart route changes route based on incoming data or alarms enable simultaneous dynamic data for analysis or correlation with wearable device integration is disclosed.

In embodiments, a system for using a mobile robot and/or mobile vehicle for mobile data collection in an industrial environment having smart ODS and transfer functions with wearable device integration is disclosed.

In embodiments, a system for using a mobile robot and/or mobile vehicle for mobile data collection in an industrial environment having hierarchical multiplexer with wearable device integration is disclosed.

In embodiments, a system for using a mobile robot and/or mobile vehicle for mobile data collection in an industrial environment having identification sensory overload with wearable device integration is disclosed.

In embodiments, a system for using a mobile robot and/or mobile vehicle for mobile data collection in an industrial environment having RF identification and an inclinometer with wearable device integration is disclosed.

In embodiments, a system for using a mobile robot and/or mobile vehicle for mobile data collection in an industrial environment having continuous ultrasonic monitoring with wearable device integration is disclosed.

In embodiments, a system for using a mobile robot and/or mobile vehicle for mobile data collection in an industrial environment having cloud-based, machine pattern recognition based on fusion of remote, analog industrial sensors with wearable device integration is disclosed.

In embodiments, a system for using a mobile robot and/or mobile vehicle for mobile data collection in an industrial environment having cloud-based, machine pattern analysis of state information from multiple analog industrial sensors to provide anticipated state information for an industrial system with wearable device integration is disclosed.

In embodiments, a system for using a mobile robot and/or mobile vehicle for mobile data collection in an industrial environment having cloud-based policy automation engine for IoT, with creation, deployment and management of IoT devices with wearable device integration is disclosed.

In embodiments, a system for using a mobile robot and/or mobile vehicle for mobile data collection in an industrial environment having on-device sensor fusion and data storage for industrial IoT devices with wearable device integration is disclosed.

In embodiments, a system for using a mobile robot and/or mobile vehicle for mobile data collection in an industrial environment having a self-organizing data marketplace for industrial IoT data with wearable device integration is disclosed.

In embodiments, a system for using a mobile robot and/or mobile vehicle for mobile data collection in an industrial environment having self-organization of data pools based on utilization and/or yield metrics with wearable device integration is disclosed.

In embodiments, a system for using a mobile robot and/or mobile vehicle for mobile data collection in an industrial environment having training AI models based on industry-specific feedback with wearable device integration is disclosed.

In embodiments, a system for using a mobile robot and/or mobile vehicle for mobile data collection in an industrial environment having a self-organized swarm of industrial data collectors with wearable device integration is disclosed.

In embodiments, a system for using a mobile robot and/or mobile vehicle for mobile data collection in an industrial environment having an IoT distributed ledger with wearable device integration is disclosed.

In embodiments, a system for using a mobile robot and/or mobile vehicle for mobile data collection in an industrial environment having a self-organizing collector with wearable device integration is disclosed.

In embodiments, a system for using a mobile robot and/or mobile vehicle for mobile data collection in an industrial environment having a network-sensitive collector with wearable device integration is disclosed.

In embodiments, a system for using a mobile robot and/or mobile vehicle for mobile data collection in an industrial environment having a remotely organized collector with wearable device integration is disclosed.

In embodiments, a system for using a mobile robot and/or mobile vehicle for mobile data collection in an industrial environment having a self-organizing storage for a multi-sensor data collector with wearable device integration is disclosed.

In embodiments, a system for using a mobile robot and/or mobile vehicle for mobile data collection in an industrial environment having a self-organizing network coding for multi-sensor data network with wearable device integration is disclosed.

In embodiments, a system for using a mobile robot and/or mobile vehicle for mobile data collection in an industrial environment having a wearable haptic user interface for an industrial sensor data collector, with vibration, heat, electrical and/or sound outputs with wearable device integration is disclosed.

In integrations, a system for using a mobile robot and/or mobile vehicle for mobile data collection in an industrial environment having heat maps displaying collection data for AR/VR with wearable device integration is disclosed.

In embodiments, a system for using a mobile robot and/or mobile vehicle for mobile data collection in an industrial environment having automatically tuned AR/VR visualization of data collected by a data collector with wearable device integration is disclosed.

In embodiments, an intelligent cooking system using a mobile robot and/or mobile vehicle for mobile data collection and having processing, communications, and other IT components for remote monitoring and control with wearable device integration is disclosed.

In embodiments, an intelligent cooking system using a mobile robot and/or mobile vehicle for mobile data collection and having a hydrogen fuel generating electrolyzer that operates on a water source to separate hydrogen and oxygen components with wearable device integration is disclosed.

In embodiments, an intelligent cooking system using a mobile robot and/or mobile vehicle for mobile data collection and having a low-pressure hydrogen storage system that stores the hydrogen generated by an electrolyzer with wearable device integration is disclosed.

In embodiments, an intelligent cooking system using a mobile robot and/or mobile vehicle for mobile data collection and having a fuel control module that automatically controls fuel sourcing or mixing devices based on some measure of historical, current, planned, and/or anticipated consumption or availability with wearable device integration is disclosed.

In embodiments, an intelligent cooking system using a mobile robot and/or mobile vehicle for mobile data collection and having a solar-powered hydrogen electrolyzer with wearable device integration is disclosed.

In embodiments, an intelligent cooking system using a mobile robot and/or mobile vehicle for mobile data collection and having a wind-powered hydrogen electrolyzer with wearable device integration is disclosed.

In embodiments, an intelligent cooking system using a mobile robot and/or mobile vehicle for mobile data collection and having a hydro-powered hydrogen electrolyzer with wearable device integration is disclosed.

In embodiments, an intelligent cooking system using a mobile robot and/or mobile vehicle for mobile data collection and having an on-demand gas-LPG hybrid burner that sources LPG, hydrogen, or other fuel dynamically without need for user input or monitoring with wearable device integration is disclosed.

In embodiments, an intelligent cooking system using a mobile robot and/or mobile vehicle for mobile data collection and having an enclosed burner chamber that provides heat in a target heat-zone as a plane of heat with wearable device integration is disclosed.

In embodiments, an intelligent cooking system using a mobile robot and/or mobile vehicle for mobile data collection and having a smart knob with connectivity and local and remote control for controlling the intelligent cooktop device or other IoT devices with wearable device integration is disclosed.

In embodiments, an intelligent cooking system using a mobile robot and/or mobile vehicle for mobile data collection and having a mobile docking facility with power for charging a mobile device, data communications, and heat protection with wearable device integration is disclosed.

In embodiments, an intelligent cooking system using a mobile robot and/or mobile vehicle for mobile data collection and having distributed modules or components that are located in sub-systems of the cooktop with wearable device integration is disclosed.

In embodiments, an intelligent cooking system using a mobile robot and/or mobile vehicle for mobile data collection and having a centralized control facility to manage operation of sub-systems of the cooktop with wearable device integration is disclosed.

In embodiments, an intelligent cooking system using a mobile robot and/or mobile vehicle for mobile data collection and having remote control capability with wearable device integration is disclosed.

In embodiments, an intelligent cooking system using a mobile robot and/or mobile vehicle for mobile data collection and having automation with wearable device integration is disclosed.

In embodiments, an intelligent cooking system using a mobile robot and/or mobile vehicle for mobile data collection and having detectors and sensors for monitoring cooking system conditions with wearable device integration is disclosed.

In embodiments, an intelligent cooking system using a mobile robot and/or mobile vehicle for mobile data collection and having machine learning for optimizing cooking system operation with wearable device integration is disclosed.

In embodiments, an intelligent cooking system using a mobile robot and/or mobile vehicle for mobile data collection and having a mobile application with wearable device integration is disclosed.

In embodiments, an intelligent cooking system using a mobile robot and/or mobile vehicle for mobile data collection and having a cloud-based platform that interacts with electronic devices and participants in a related ecosystem of suppliers, content providers, service providers, and regulators to deliver value-added services to users of the intelligent cooking system, users of the hydrogen production system, and other participants of the ecosystem with wearable device integration is disclosed.

In embodiments, an intelligent cooking system using a mobile robot and/or mobile vehicle for mobile data collection and having a recommendation engine for providing recommendations to users with wearable device integration is disclosed.

In embodiments, an intelligent cooking system using a mobile robot and/or mobile vehicle for mobile data collection and having a notification engine for providing notifications to users with wearable device integration is disclosed.

In embodiments, an intelligent cooking system using a mobile robot and/or mobile vehicle for mobile data collection and having an advertising engine for providing location-based offers to users with wearable device integration is disclosed.

In embodiments, an intelligent cooking system using a mobile robot and/or mobile vehicle for mobile data collection and having interfaces that allow machine-to-machine or user-to-machine communication with other devices and the cloud, for contributing data for analytics, monitoring, control, and operation of other devices and systems with wearable device integration is disclosed.

In embodiments, an intelligent cooking system using a mobile robot and/or mobile vehicle for mobile data collection and having a user interface that facilitates contextual and intelligence-driven personalized experience for computing devices that connect to a network based around the intelligent cooking system with wearable device integration is disclosed.

In embodiments, an intelligent cooking system using a mobile robot and/or mobile vehicle for mobile data collection and having analytics for profiling, recording or analyzing users, usage of the device, maintenance and repair histories, patterns relating to patterns or faults, energy use patterns, cooking patterns, and deployment, use, and service of electrolyzer with wearable device integration is disclosed.

In embodiments, an intelligent cooking system using a mobile robot and/or mobile vehicle for mobile data collection and having a commerce utility for ordering ingredients, components, and materials with wearable device integration is disclosed.

In embodiments, an intelligent cooking system using a mobile robot and/or mobile vehicle for mobile data collection and having a cooking assistance utility for assisting users with cooking tasks with wearable device integration is disclosed.

In embodiments, an intelligent cooking system using a mobile robot and/or mobile vehicle for mobile data collection and having a health utility for providing health indices for foods, nutritional information, nutritional search capabilities, nutritional assistance, and personalized suggestions and recommendations with wearable device integration is disclosed.

In embodiments, an intelligent cooking system using a mobile robot and/or mobile vehicle for mobile data collection and having an infotainment utility for playing music, videos, and/or podcasts with wearable device integration is disclosed.

In embodiments, an intelligent cooking system using a mobile robot and/or mobile vehicle for mobile data collection and having a broadcasting utility for enabling a personalized cooking channel that is broadcast from the cooking system with wearable device integration is disclosed.

In embodiments, an intelligent cooking system using a mobile robot and/or mobile vehicle for mobile data collection and having a food investigation utility for gathering information from smart cooktops and user activity about recipes being used by users of the smart cooktop systems throughout a region with wearable device integration is disclosed.

In embodiments, a system for using a mobile robot and/or mobile vehicle for mobile data collection in an industrial environment having an IoT platform with wearable device integration is disclosed.

In embodiments, a system for using a mobile robot and/or mobile vehicle for mobile data collection in an industrial environment having an IoT data adapter for receiving data inputs and establishing a connection with one or more available IoT cloud platforms to publish the data with wearable device integration is disclosed.

In embodiments, a system for using a mobile robot and/or mobile vehicle for mobile data collection in an industrial environment having a condition detector for detecting conditions related to connect attempts made by the IoT data adapter to one or more IoT cloud platforms with wearable device integration is disclosed.

In embodiments, a system for using a mobile robot and/or mobile vehicle for mobile data collection in an industrial environment having an IoT data adapter with an adaptation engine with wearable device integration is disclosed.

In embodiments, a system for using a mobile robot and/or mobile vehicle for mobile data collection in an industrial environment having the use of machine learning to prepare a data packet or stream with wearable device integration is disclosed.

In embodiments, a system for using a mobile robot and/or mobile vehicle for mobile data collection in an industrial environment having a data marketplace that provides a pool of available cloud networking platforms with wearable device integration is disclosed.

In embodiments, a system for using a mobile robot and/or mobile vehicle for mobile data collection in an industrial environment having a messaging utility that provides a cloud platform user interface with a message indicating the availability of a new data source and data source integration and usage instructions with wearable device integration is disclosed.

In embodiments, a system for using a mobile robot and/or mobile vehicle for mobile data communication between nodes having the ability to maintain a first and second transmission limit based on received rate of arrival and success of delivery feedback messages, and limiting transmission of messages based on the transmission limits with wearable device integration is disclosed.

In embodiments, a system for using a mobile robot and/or mobile vehicle for mobile data communication between nodes having the ability to limit transmission of further messages not yet acknowledged as successfully delivered according to the window size with wearable device integration is disclosed.

In embodiments, a system for using a mobile robot and/or mobile vehicle for mobile data communication between nodes having the ability to maintain an estimate of a rate of loss events and use it to adjust the rate of redundancy messages with wearable device integration is disclosed.

In embodiments, a system for using a mobile robot and/or mobile vehicle for mobile data communication between nodes having an estimated rate of loss events where the error correction code used to determine redundancy messages chosen is based on the estimated rate of loss events with wearable device integration is disclosed.

In embodiments, a system for using a mobile robot and/or mobile vehicle for mobile data communication between nodes having the ability to apply forward error correction based on messages received describing channel characteristics with wearable device integration is disclosed.

In embodiments, a system for using a mobile robot and/or mobile vehicle for mobile data communication between nodes having the ability to maintain/set timers based on occurrences of delivery order events and delaying transmission of feedback messages using timers with wearable device integration is disclosed.

In embodiments, a system for using a mobile robot and/or mobile vehicle for mobile data communication between nodes having the ability to maintain/set timers based on occurrences of delivery order events and delaying modification of congestion window size based on timers with wearable device integration is disclosed.

In embodiments, a system for using a mobile robot and/or mobile vehicle for mobile data communication between nodes having the ability to maintain/set timers based on occurrences of delivery order events, delaying modification of congestion window size based on timers, and cancelling modification of congestion window size when receiving a feedback message indicating successful delivery with wearable device integration is disclosed.

In embodiments, a system for using a mobile robot and/or mobile vehicle for mobile data communication between nodes having the ability to configure a new connection using maintained data characterizing a current/previous connection with wearable device integration is disclosed.

In embodiments, a system for using a mobile robot and/or mobile vehicle for mobile data communication between nodes having the ability to configure a new connection using maintained data characterizing an error rate of a current/previous connection with wearable device integration is disclosed.

In embodiments, a system for using a mobile robot and/or mobile vehicle for mobile data communication between nodes having the ability to configure a new connection using maintained data characterizing a timing variability of a current/previous connection with wearable device integration is disclosed.

In embodiments, a system for using a mobile robot and/or mobile vehicle for mobile data communication between nodes having the ability to configure a new connection using maintained data characterizing bandwidth of a current/previous connection with wearable device integration is disclosed.

In embodiments, a system for using a mobile robot and/or mobile vehicle for mobile data communication between nodes having the ability to configure a new connection using maintained data characterizing round trip time of a current/previous connection with wearable device integration is disclosed.

In embodiments, a system for using a mobile robot and/or mobile vehicle for mobile data communication between nodes having the ability to configure a new connection using maintained data characterizing communication control parameters of a current/previous connection with wearable device integration is disclosed.

In embodiments, a system for using a mobile robot and/or mobile vehicle for mobile data communication between nodes having the ability to configure new connection using maintained data characterizing forward error correction parameters of a current/previous connection with wearable device integration is disclosed.

In embodiments, a system for using a mobile robot and/or mobile vehicle for mobile data communication between nodes having a data store for maintaining data characterizing one or more current or previous data communication connections and a connection initiation module for initiating new data communication connections based on maintained data with wearable device integration is disclosed.

In embodiments, a system for using a mobile robot and/or mobile vehicle for mobile data communication between nodes having the ability to transmit a first subset of data messages over a lower latency data path and a second subset of messages over a higher latency data path with wearable device integration is disclosed.

In embodiments, a system for using a mobile robot and/or mobile vehicle for mobile data communication between nodes having the ability to transmit a first subset of data messages that are time critical over a lower latency data path and a second subset of messages over a higher latency data path with wearable device integration is disclosed.

In embodiments, a system for using a mobile robot and/or mobile vehicle for mobile data communication between nodes having the ability to transmit a first initial subset of data messages over a lower latency data path and a second subset of messages that are subsequently available over a higher latency data path with wearable device integration is disclosed.

In embodiments, a system for using a mobile robot and/or mobile vehicle for mobile data communication between nodes having the ability to transmit a first subset of acknowledgment messages over a lower latency data path and a second subset of data messages over a higher latency data path with wearable device integration is disclosed.

In embodiments, a system for using a mobile robot and/or mobile vehicle for mobile data communication between nodes having the ability to transmit a first subset of supplemental/redundancy data messages over a lower latency data path and a second subset of data messages over a higher latency data path with wearable device integration is disclosed.

In embodiments, a system for using a mobile robot and/or mobile vehicle for mobile data communication between nodes having a degree of redundancy associated with each message that is based on message position in the transmission order with wearable device integration is disclosed.

In embodiments, a system for using a mobile robot and/or mobile vehicle for mobile data communication between nodes having a degree of redundancy associated with each message that increases as the position of the messages is non-decreasing with wearable device integration is disclosed.

In embodiments, a system for using a mobile robot and/or mobile vehicle for mobile data communication between nodes having a degree of redundancy associated with each message that is based on message position in the transmission order and in response to receiving feedback messages with wearable device integration is disclosed.

In embodiments, a system for using a mobile robot and/or mobile vehicle for mobile data communication between nodes having a degree of redundancy associated with each message that is based on message position in the transmission order and in response to receiving feedback messages, and adding or removing redundancy messages from the queue based on the feedback messages with wearable device integration is disclosed.

In embodiments, a system for using a mobile robot and/or mobile vehicle for mobile data communication between nodes having the ability to adjust the number of messages sent over each of multiple different data paths with different communication protocols if it is determined that a data path is altering flow of messages with wearable device integration is disclosed.

In embodiments, a system for using a mobile robot and/or mobile vehicle for mobile data communication between nodes having the ability to adjust the number of messages sent over each of multiple different data paths with different communication protocols if it is determined that a data path is altering flow of messages initial division based on previous communication connections with wearable device integration is disclosed.

In embodiments, a system for using a mobile robot and/or mobile vehicle for mobile data communication between nodes having the ability to modify/add/remove redundancy information associated with encoded data as it travels from node to node via channels based on channel characteristics with wearable device integration is disclosed.

In embodiments, a system for using a mobile robot and/or mobile vehicle for mobile data communication between nodes having the ability to send FEC packets at an estimated rate of loss events (isolated packet loss or burst of consecutive packets) with wearable device integration is disclosed.

In embodiments, a system for using a mobile robot and/or mobile vehicle for mobile data communication between nodes having combined coding, TCP, and pacing of packet transmissions with wearable device integration is disclosed.

In embodiments, a system for using a mobile robot and/or mobile vehicle for mobile data communication between nodes having a forward error correction code construction that interleaves groups of message packets and parity packets and has coding across overlapping groups of message packets with wearable device integration is disclosed.

In embodiments, a system for using a mobile robot and/or mobile vehicle for mobile data communication between nodes having a variant of TCP that combines delay-based back-off with a stable window increase function with wearable device integration is disclosed.

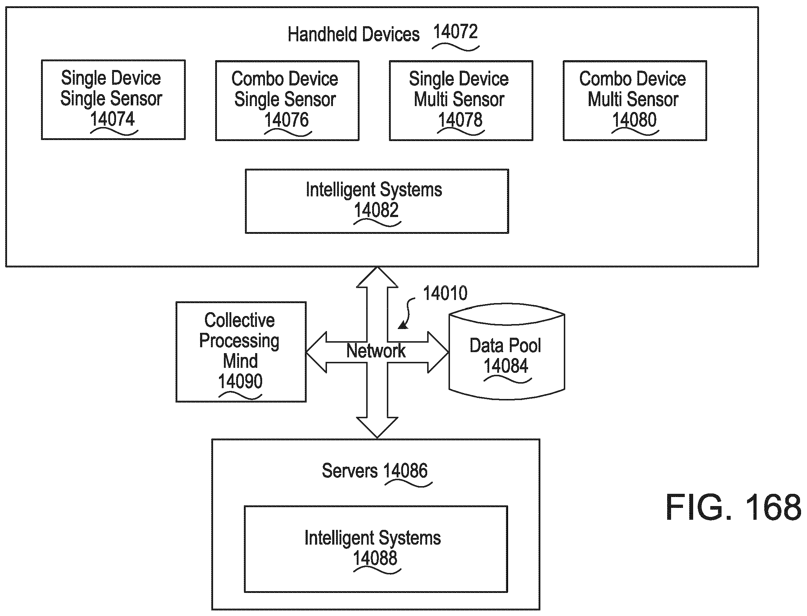

Systems and methods for using handheld devices for mobile data collection within an environment for industrial IoT data collection are next described with respect to FIGS. 168 to 171. Referring first to Figure 168, a data collection system may include one or more handheld devices configured to act as mobile data collectors within an environment for industrial IoT data collection. For example, the one or more handheld devices may transmit data to, receive data from, transmit commands to, receive commands from, be under the control of, communicate controls for, or otherwise communicate with the industrial IoT data collection, monitoring and control system 10. Methods and systems are disclosed herein for data collection using handheld devices, including a single handheld device having a single sensor for recording state-related measurements within the environment for industrial IoT data collection, a single handheld device having multiple sensors for recording state-related measurements within the environment for industrial IoT data collection, multiple handheld devices each having a single sensor for recording state-related measurements within the environment for industrial IoT data collection, and multiple handheld devices each having one or more sensors for recording state-related measurements within the environment for industrial IoT data collection. For example, a handheld device may be a wearable haptic or multi-sensor user interface for an industrial sensor data collector, with vibration, heat, electrical, and/or sound outputs. In another example, a handheld device may be any other suitable device, component, unit, or other computational aspect having a tangible form and which is configured or otherwise able to be used by disposing on a person within an industrial environment, regardless of the period of time of such use. Examples of handheld devices include, without limitation, mobile phones, laptop computers, tablet computers, personal digital assistants, walkie-talkies, radios, long or short range communication devices, flashlights, or any other suitable handheld devices with sensors integrated therein or coupled thereto. Regardless of the particular form, a handheld device according to this disclosure includes one or more sensors for recording state-related measurements of an environment for industrial IoT data collection. For example, the one or more sensors of a handheld device described in this disclosure can measure states with respect to equipment within an industrial IoT environment or with respect to the industrial IoT environment itself.

A number of handheld devices 14072 are located within the environment for industrial IoT data collection. The handheld devices 14072 may be handheld devices issued by an operator of the environment for industrial IoT data collection. Alternatively, the handheld devices 14072 may be handheld devices owned by workers selected to perform tasks within the environment for industrial IoT data collection. As shown in Figure 168, the handheld devices 14072 include a single handheld device with a single sensor 14074, a single handheld device with multiple sensors 14076, a combination of handheld devices each with a single sensor 14078, and a combination of handheld devices each with one or more sensors 14080. However, in embodiments, the handheld devices 14072 may include different handheld devices. For example, in embodiments, the handheld devices 14072 may omit the combination of handheld devices each with the single sensor 14078 and/or the combination of handheld devices each with one or more of the sensors 14080. For example, the handheld devices 14072 may be limited to individual handheld devices rather than combinations of handheld devices that offer combined, improved or otherwise different functionality compared to each of the constituent handheld devices taken individually. In another example, in embodiments, the handheld devices 14072 may omit the single handheld device with the single sensor 14074 and/or the single handheld device with multiple sensors 14076. For example, the handheld devices 14072 may be limited to combinations of handheld devices rather than individual devices (e.g., where specific combinations of the handheld devices are identified as being valuable in particular contexts or otherwise for recording particular state-related measurements within the environment for industrial IoT data collection).

In embodiments, different handheld devices 14072 may be configured to record certain types of state-related measurements of some or all of the targets (e.g., devices or equipment) within the environment for industrial IoT data collection. For example, some of the handheld devices 14072 may be configured to record state-related measurements based on vibrations measured with respect to some or all of the targets. In another example, some of the handheld devices 14072 may be configured to record state-related measurements based on temperatures measured with respect to some or all of the targets. In another example, some of the handheld devices 14072 may be configured to record state-related measurements based on electrical or magnetic outputs measured with respect to some or all of the targets. In another example, some of the handheld devices 14072 may be configured to record state-related measurements based on sound outputs measured with respect to some or all of the targets. In another example, some of the handheld devices 14072 may be configured to record state-related measurements based on outputs other than vibrations, temperatures, electrical or magnetic, or sound, as measured with respect to some or all of the targets.

Alternatively, or additionally, different handheld devices 14072 may be configured to record some or all state-related measurements of certain types of the targets within the environment for industrial IoT data collection. For example, some of the handheld devices 14072 may be configured to record some or all state-related measurements from agitators (e.g., turbine agitators), airframe control surface vibration devices, catalytic reactors, compressors, and the like. In another example, some of the handheld devices 14072 may be configured to record some or all state-related measurements from conveyors and lifters, disposal systems, drive trains, fans, irrigation systems, motors, and the like. In another example, some of the handheld devices 14072 may be configured to record some or all state-related measurements from pipelines, electric powertrains, production platforms, pumps (e.g., water pumps), robotic assembly systems, thermic heating systems, tracks, transmission systems, turbines, and the like. In embodiments, the handheld devices 14072 may be configured to record some or all state-related measurements of certain types of industrial environments. For example, an industrial environment having targets with states measured using the handheld devices 14072 may include, but is not limited to, a manufacturing environment, a fossil fuel energy production environment, an aerospace environment, a mining environment, a construction environment, a ship environment, a shipping environment, a submarine environment, a wind energy production environment, a hydroelectric energy production environment, a nuclear energy production environment, an oil drilling environment, an oil pipeline environment, any other suitable energy product environment, any other suitable energy routing or transmission environment, any other suitable industrial environment, a factory, an airplane or other aircraft, a distribution environment, an energy source extraction environment, an offshore exploration site, an underwater exploration site, an assembly line, a warehouse, a power generation environment, a hazardous waste environment, and the like.

In embodiments, the state-related measurements using the handheld devices 14072 may be made available over the network 14010 (e.g., as described with respect to Figure 161) without the need for external networks. The network 14010 may be a MANET (e.g., the MANET 20 shown in Figure. 2 or any other suitable MANET n), the Internet (e.g., the Internet 110 shown in Figure 3 or any other suitable Internet), or any other suitable type of network, or any combination thereof. For example, the network 14010 may be used to receive state-related measurements recorded using the handheld devices 14072. The network 14010 may then be used to transmit some or all of those received state-related measurements to other components of the data collection system 102. For example, the network 14010 may be used to transmit some or all of the received state-related measurements to data pool 14084 (e.g., the data pool 60 shown in Figure 2 or any other suitable data pool) for storage of those received state-related measurements. In another example, the network 14010 may be used to transmit some or all of the received state-related measurements to servers 14086 of the environment for industrial IoT data collection (e.g., the servers 14014 shown in Figure 161, or any other suitable server). The servers 14086 may include one or more hardware or software server aspects. For example, the servers 14086 to which the received state-related measurements are transmitted may include intelligent systems 14088 for processing the received state-related measurements. The intelligent systems 14088 may process the received state-related measurements using artificial intelligence processes, machine learning processes, and/or other cognitive processes to identify information within or otherwise associated with the received state-related measurements. In embodiments, after processing the received state-related measurements, the servers 14086 to which the received state-related measurements are transmitted may transmit the processed information or data indicative of the processed information to other systems (e.g., for storage or analysis). The data indicative of the processed information from the servers 14086 may include, for example, output or other results of the artificial intelligence processes, machine learning processes, and/or other cognitive processes.

In embodiments, some or all of the handheld devices 14072 may include intelligent systems 14082 for processing the state-related measurements recorded using those handheld devices 14072 before transmitting those recorded state-related measurements (e.g., over the network 14010 or any other suitable communication mechanism). For example, some or all of the handheld devices 14072 may integrate artificial intelligence processes, machine learning processes, and/or other cognitive processes for analyzing the state-related measurements recorded thereby. The processing by the intelligent systems 14082 of the handheld devices 14072 may be or be represented within a pre-processing step of the industrial IoT data collection, monitoring and control system 10. For example, the pre-processing may be selectively performed by certain types of the handheld devices 14072 to pre-process the recorded state-related measurements (e.g., to identify redundant information, irrelevant information, or insignificant information). In another example, the pre-processing may be automated for certain types of the handheld devices 14072 to pre-process the recorded state-related measurements (e.g., to identify redundant information, irrelevant information, or insignificant information). In another example, the pre-processing may be selectively performed for certain types of state-related measurements recorded by any of the handheld devices 14072 to pre-process the recorded state-related measurements (e.g., to identify redundant information, irrelevant information, or insignificant information). In another example, the pre-processing may be automated for certain types of state-related measurements recorded by any of the handheld devices 14072 to pre-process the recorded state-related measurements (e.g., to identify redundant information, irrelevant information, or insignificant information).

In embodiments, some or all of the handheld devices 14072 may include sensor fusion functionality. For example, the sensor fusion functionality may be embodied as the on-device sensor fusion 80. For example, state-related measurements recorded using multiple analog sensors of one or more of the handheld devices 14072 (e.g., the multiple analog sensors 82 shown in Figure 4 or any other suitable sensor) may be locally or remotely processed using artificial intelligence processes, machine learning processes, and/or other cognitive processes, which may be embodied within the handheld devices 14072 themselves, the servers 14086, or both. The sensor fusion functionality may be embodied by a pre-processing step that is performed prior to the artificial intelligence processes, machine learning processes, and/or other cognitive processes. In embodiments, the sensor fusion functionality may be performed using a MUX. For example, each of the single handheld devices with multiple sensors 14076 may include its own MUX for combining state-related measurements recorded using different individual sensors of those multiple sensors. In another example, some or all of the individual handheld devices within the combination of handheld devices each with one or more sensors 14080 may include its own MUX for combining state-related measurements recorded using different individual sensors of those multiple sensors. In some such embodiments, the MUX may be internal to those handheld devices. In some such embodiments, the MUX may be external to those handheld devices.

The handheld devices 14072 may be controlled by or otherwise used in connection within the host processing system 112 shown in Figure 6 (or any other suitable host system). The host processing system 112 may be locally accessible over the network 14010. Alternatively, the host processing system 112 may be remote (e.g., as embodied in a cloud computing system), may be accessible using one or more network infrastructure elements (e.g., access points, switches, routers, servers, gateways, bridges, connectors, physical interfaces and the like), and/or use one or more network protocols (e.g., IP-based protocols, TCP/IP, UDP, HTTP, Bluetooth, Bluetooth Low Energy, cellular protocols, LTE, 2G, 3G, 4G, 5G, CDMA, TDSM, packet-based protocols, streaming protocols, file transfer protocols, broadcast protocols, multi-cast protocols, unicast protocols, and the like). In embodiments, the state-related measurements recorded using the handheld devices 14072 may be processed using a network coding system or method, which may be embodied internally or externally with respect to the host processing system 112. For example, the network coding system can process the measurements recorded using the handheld devices 14072 based on the availability of networks for communicating those recorded state-related measurements, based on the availability of bandwidth and spectrum for communicating those recorded state-related measurements, based on other network characteristics, or based on some combination thereof.

In embodiments, the state-related measurements recorded using the handheld devices 14072 may be pulled from the handheld devices 14072 by an upstream device (e.g., a client device or other software or hardware aspect used to review, analyze, or otherwise view the state-related measurements). For example, the handheld devices 14072 may not actively transmit the state-related measurements that are received (e.g., at the servers 14086, the data pool 14084, or any other suitable hardware or software component that receives the state-related measurements recorded using the handheld devices 14072). Rather, the transmission of the state-related measurements from the handheld devices 14072 may be caused by commands received at the handheld devices 14072 (e.g., from servers 14086 or from other hardware or software of the data collection system 102). For example, a data collector, which may be fixed within a particular location of the environment of industrial IoT data collection or mobile therein, may be configured to pull state-related measurements recorded using various handheld devices 14072. For example, the handheld devices 14072 may continuously, periodically, or otherwise at multiple times record state-related measurements within the environment for industrial IoT data collection. The data collector may, at fixed intervals, at random times, or otherwise, transmit one or more commands to some or all of the handheld devices 14072 to pull some or all of the state-related measurements recorded using those handheld devices 14072 since the last time state-related measurements were pulled therefrom. Alternatively, the data collector may, at those fixed intervals, at those random times, or otherwise, transmit the one or more commands to a collective processing mind 14090 associated with the handheld devices 14072. For example, the collective processing mind 14090 may be or include a hub for receiving the state-related measurements recorded using some or all of the handheld devices 14072. In another example, the commands, when processed using individual handheld devices 14072 or by the collective processing mind 14090 of the handheld devices 14072, cause the recorded state-related measurements or data representative thereof to be transmitted from the handheld devices 14072. For example, the collective processing mind 14090 may be configured to pull the state-related measurements from some or all of the handheld devices 14072 (e.g., at fixed intervals, at random times, or otherwise). The collective processing mind 14090 may then transmit the state-related measurements pulled from the handheld devices 14072 (e.g., to the servers 14086, the data pool 14084, or the other hardware or software component selected or otherwise configured to receive the state-related measurements).

In embodiments, the state-related measurements recorded using the handheld devices 14072 may be transmitted from the handheld devices 14072 responsive to requests for those state-related measurements. For example, the collective processing mind 14090 may, at fixed intervals, at random times, or otherwise, transmit a request for recorded state-related measurements to some or all of the handheld devices 14072. The processors of the some or all of the handheld devices 14072 to which the request is sent may process the request to determine which state-related measurements to transmit. For example, data indicative of a time of a most recent request for recorded state-related measurements may be accessed by those processors. The processors may then compare that time to a time at which the new request is received from the collective processing mind 14090. The processors may then query a data store for state-related measurements recorded between the two times. The processors may then transmit those state-related measurements in response to the request. In another example, the processors may identify a most recent set of state-related measurements recorded using the corresponding handheld devices 14072 and transmit those state-related measurements in response to the request. In another example, data collectors within the data collection system 10 may transmit the request directly to the handheld devices 14072. In yet another example, the data collectors may transmit the request to the collective processing mind 14090. The collective processing mind 14090 may process the request to determine select individual handheld devices 14072 which were used to record the requested state-related measurements. The collective processing mind 14090 may then transmit certain state-related measurements in response to the request by, for example, querying a storage for some or all of the state-related measurements recorded using those select individual handheld devices 14072. Alternatively, the collective processing mind 14090 may process the request to determine which of the state-related measurements recorded by some or all of the handheld devices 14072 to transmit in response to the request (e.g., based on a time of the request). For example, the collective processing mind 14090 can compare the time of the request to a time of a most recent request for recorded state-related measurements. The collective processing mind 14090 can then retrieve the state-related measurements recorded in between those times and transmit the retrieved state-related measurements in response to the request.

In embodiments, the state-related measurements recorded using the handheld devices 14072 may be pushed from the handheld devices 14072 to an upstream device (e.g., a client device or other software or hardware aspect used to review, analyze, or otherwise view the state-related measurements). For example, the handheld devices 14072 may actively transmit the state-related measurements that are received (e.g., at the servers 14086, the data pool 14084, or any other suitable hardware or software component that receives the state-related measurements recorded using the handheld devices 14072), without such receiving hardware or software component requesting those state-related measurements or otherwise causing the handheld device to transmit those state-related measurements based on a command. For example, some or all of the handheld devices 14072 may transmit state-related measurements on a fixed interval, at random times, immediately upon the recording of those state-related measurements, some amount of time after recording those measurements, upon a determination that a threshold number of state-related measurements have been recorded, or at other suitable times. In some such embodiments, the handheld devices 14072, either by themselves or using the collective processing mind 14090, may push the recorded state-related measurements in response to detecting a near proximity of a data collection router 14092.

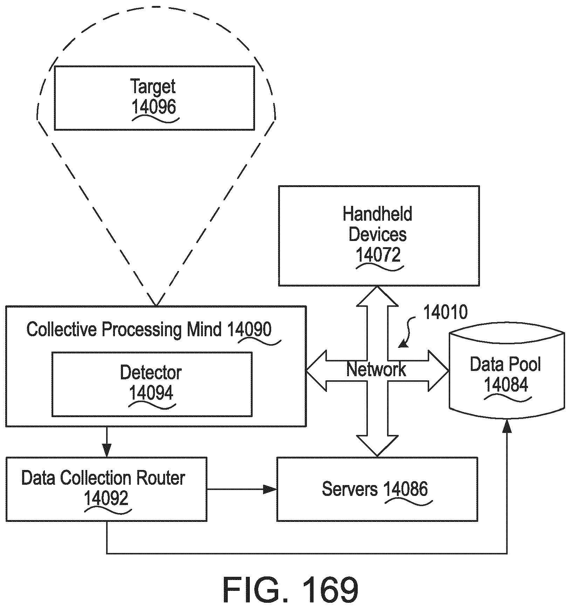

For example, referring next to Figure 169, the collective processing mind 14090 may include a detector 14094 configured to detect a near proximity of a target 14096 (e.g., one of the devices 13006 shown in Figure 134 or any other suitable target) with respect to one or more of the handheld devices 14072. For example, upon such a detection, the collective processing mind 14090 may send a signal to the one or more of the handheld devices 14072 to record and transmit state-related measurements of receipt at the data collection router 14092. Alternatively, upon such a detection, the collective processing mind 14090 may query a data store to retrieve state-related measurements and then transmit those state-related measurements of receipt at the data collection router 14092. In either case, the data collection router 14092 forwards the received state-related measurements to the servers 14086, the data pool 14084, or any other suitable hardware or software component. In another example, upon such a detection, the collective processing mind 14090 may send the signal directly to the servers 14086, the data pool 14084, or the other hardware or software component, for example, to bypass the data collection router 14092 or where the data collection router 14092 is omitted.

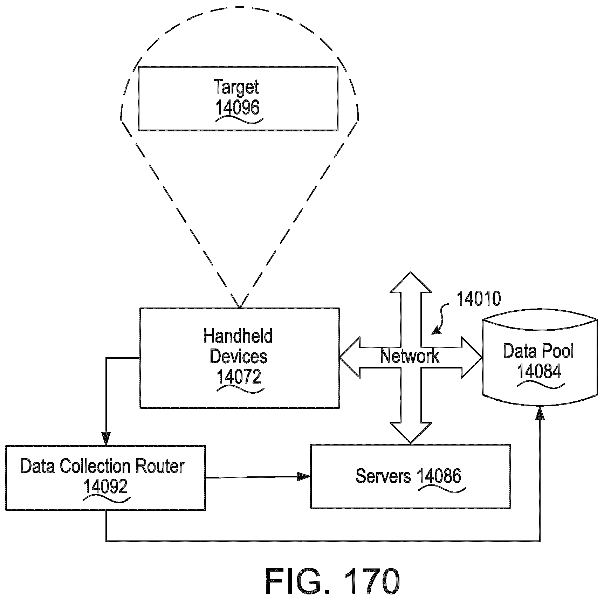

Referring next to Figure 170, in embodiments, the collective processing mind 14090 may be omitted. Instead, the handheld devices 14072 detect the near proximity of the target 14096. Upon such detection using the handheld devices 14072 (e.g., one or more of the single handheld device with the single sensor 14074, the single handheld device with multiple sensors 14076, the combination of handheld devices each with the single sensor 14078, or the combination of handheld devices each with one or more sensors 14080), the handheld devices 14072 record state-related measurements of the target 14096 (e.g., vibrations, temperature, electrical or magnetic output, sound output, or the like). The recorded state-related measurements can be transmitted over the network 14010 (e.g., to the data pool 14084, the servers 14086, or any other suitable hardware or software component). Alternatively, the recorded state-related measurements can be transmitted to the data collection router 14092, for example, where the network 14010 is unavailable or where the data collection router 14092 is configured to receive and/or pre-process the recorded state-related measurements from the handheld devices 14072. The data collection router 14092 may be one of a number of data collection routers 14092 located throughout the environment for industrial IoT data collection. For example, the data collection router 14092 may be a data collection router 14092 configured to transmit state-related measurements specifically recorded for the target 14096.

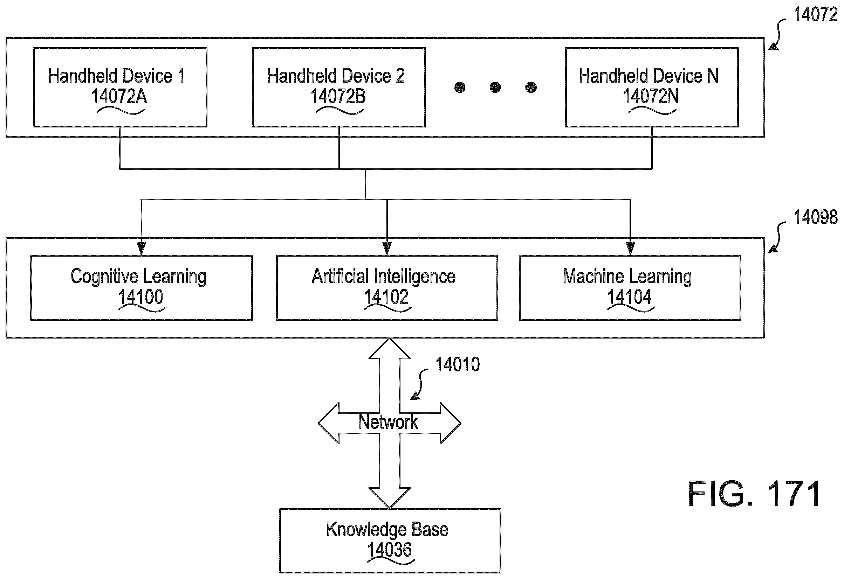

Referring next to Figure 171, various aspects of functionality of intelligent systems 14098 used to process output of the handheld devices 14072 are disclosed. The intelligent systems 14098 include a cognitive learning module 14100, an artificial intelligence module 14102, and a machine learning module 14104. In embodiments, the intelligent systems 14098 may include additional or fewer modules. The intelligent systems 14098 may, for example, be the intelligent systems 14082 or the intelligent systems 14088 shown in Figure 161 or any other suitable intelligent system. Although shown as separate modules, in embodiments, there may be overlap between some or all of the cognitive learning module 14100, the artificial intelligence module 14102, and the machine learning module 14104. For example, the artificial intelligence module 14102 may include the machine learning module 14104. In another example, the cognitive learning module 14100 may include the artificial intelligence module 14102 (and, in embodiments, therefore, the machine learning module 14104). The handheld devices 14072 may include any number of handheld devices. For example, as shown, the handheld devices 14072 include a first handheld device 14072A, a second handheld device 14072B, and an Nth handheld device 14072N, where N is a number greater than two. The intelligent systems 14098 receives the output of the handheld devices 14072A, 14072B, ... 14072N. In particular, one or more of the modules 14100, 14102, and 14104 of the intelligent systems 14098 receives data generated by and output from one or more of the handheld devices 14072A, 14072B, ... 14072N. The output from the handheld devices 14072A, 14072B, ... 14072N may, for example, include state-related measurements recorded using the handheld devices 14072A, 14072B, ... 14072N, for example, state-related measurements of equipment within an environment for industrial IoT data collection. In embodiments, the output from the handheld devices 14072A, 14072B, ... 14072N may be processed by all three of the modules 14100, 14102, and 14104 of the intelligent systems 14098. In embodiments, the output from the handheld devices 14072A, 14072B, ... 14072N may be processed by only one of the modules 14100, 14102, and 14104 of the intelligent systems 14098. For example, the particular one of the modules 14100, 14102, and 14104 of the intelligent systems 14098 to use to process the output from the handheld devices 14072A, 14072B, ... 14072N may be selected based on the handheld device used to generate that output, the equipment measured in generating that output, the values of the output, other selection criteria, and the like.

The knowledge base 14036 (e.g., as shown in Figure 164) may be updated based on output from the intelligent systems 14098. The knowledge base 14036 represents a library or other set or collection of knowledge related to the environment of the industrial IoT data collection, including equipment within that environment, tasks performed within that environment, personnel having the skill to perform tasks within that environment, and the like. The intelligent systems 14098 can process the state-related measurements recorded using the handheld devices 14072A, 14072B, ... 14072N to facilitate knowledge gathering for expanding the knowledge base 14036. For example, the modules 14100, 14102, and 14104 of the intelligent systems 14098 can process those state-related measurements against existing knowledge within the knowledge base 14036 to update or otherwise modify information within the knowledge base 14036. The intelligent systems 14098 may use intelligence and machine learning capabilities (e.g., of the machine learning module 14104 or as described elsewhere in this disclosure) to process state-related measurements and related information based on detected conditions (e.g., conditions informed by the handheld devices 14072 and/or provided as training data) and/or state information (e.g., state information determined by a machine state recognition system that may determine a state, for example, relating to an operational state, an environmental state, a state within a known process or workflow, a state involving a fault or diagnostic condition, and the like). This may include optimization of input selection and configuration based on learning feedback from the learning feedback system, which may include providing training data (e.g., from a host processing system or from other data collection systems either directly or from the host processing system) and may include providing feedback metrics (e.g., success metrics calculated within an analytic system of the host processing system). Examples of host processing systems, learning feedback systems, data collection systems, and analytic systems are described elsewhere in this disclosure. Thus, the intelligent systems 14098 can be used to update workflows of tasks assigned and performed within the industrial IoT environment based on output from the handheld devices 14072A, 14072B, ... 14072N.

In embodiments, the intelligent systems 14098, either within one of the modules 14100, 14102, and 14104 or otherwise, may include other intelligence or machine learning aspects. For example, the intelligent systems 14098 may include one or more of a YOLO neural network, a YOLO CNN, a set of neural networks configured to operate on or from a FPGA, a set of neural networks configured to operate on or from a FPGA and GPU hybrid component, a user configurable series and parallel flow for a hybrid neural network (e.g., configuring series and/or parallel flows between neural networks as outputs which can be communicated between such neural networks), a machine learning system for automatically configuring a topology or workflow for a set of hybrid neural networks (e.g., series, parallel, data flows, etc.) based on a training data set which may or may not use manual configurations (e.g., by a human user), a deep learning system for automatically configuring a topology or workflow for a set of hybrid neural networks (e.g., series, parallel, data flows, etc.) based on a training data set of outcomes from industrial IoT processes (e.g., maintenance, repair, service, prediction of faults, optimization of operation of a machine, system of facility, etc.), or other intelligence or machine learning aspects.

Thus, in embodiments, the output of the handheld devices 14072 may be processed using the intelligent systems 14088 to add to, remove from, or otherwise modify the knowledge base 14036. For example, the knowledge base 14036 may reflect information to use to perform one or more tasks within the industrial environment in which the targets are located and in which the handheld devices 14072 are used. The output from the handheld devices 14072 can thus be used to increase knowledge as to the nature of issues that arise with respect to the industrial environment, for example, by describing information about the target from which measurements were recorded, a time and/or date at which the measurements were recorded, pre-existing state or other condition information about the target, information about the time required to resolve an issue with respect to a target, information about how to resolve an issue with respect to a target, information indicating an amount of downtime to the target and to other aspects of the respective industrial environment resulting from resolving the issue, an indication of whether the issue should be resolved now or later (or not at all), and the like. The intelligent systems 14088 may process that output to update existing training data. For example, the existing training data can be used to update the machine learning, artificial intelligence, and/or other cognitive functionality for identifying states of targets based on the output of the handheld devices 14072.

For example, the knowledge base 14036 may include a series of databases or other tables or graphs arranged hierarchically based on the target or the area of the industrial environment that includes the target. For example, a first layer of the knowledge base 14036 may refer to the industrial environment (e.g., a power plant, a manufacturing facility, a mining facility, etc.). A second layer of the knowledge base 14036 may refer to zones within the industrial environment (e.g., zone 1, zone 2, etc., or named zones, as the case may be). A third layer of the knowledge base 14036 may refer to targets within those zones (e.g., within a first zone of a power plant including electrical equipment, this could include alternators, circuit breakers, transformers, batteries, exciters, etc., and, within a second zone of a power plant including a turbine, a generator, a generator magnet, etc.). The knowledge base 14036 may be updated based on output of the intelligent systems 14088, by manual user data entry, or both. For example, a worker within manufacturing facility may be given one or more handheld devices (e.g., the handheld devices 14072). The worker may walk around the manufacturing facility and approach several pieces of machinery in different zones, including a hydraulic press within a first zone, a thermoforming machine within a second zone, and a conveyor within a third zone. In approaching the first zone, the handheld device may record a measurement with respect to the hydraulic press indicating a vibration resulting from the operation of the hydraulic press. That measurement is then processed using the intelligent systems 14088, for example, against data stored in a database for the hydraulic press within the knowledge base 14036. In the event the measurement is inconsistent with the data stored in that database, the intelligent system 14088 may determine that the hydraulic press is not operating properly. For example, if the vibration resulting from the operation of the hydraulic press is less than what is recorded in the knowledge base 14036, it may be determined that the hydraulic press is not functioning at an optimal rate. The data within the knowledge base 14036 may then be consulted to determine the likely causes of this issue, including how much time would be required to resolve it. For example, the knowledge base 14036 can indicate that low vibration output is caused by a particular part failure with respect to the hydraulic press.

The worker may then walk to the thermoforming machine and use the handheld device to measure an ambient temperature around that machine. The measurement is processed using the intelligent systems 14088 to determine that the thermoforming machine is outputting an expected temperature. The worker may then walk to the conveyor and use the handheld machine to measure the velocity of the conveyor. For example, a camera vision system built into the handheld device may be used to detect an operating velocity of the conveyor. The operating velocity may then be compared against the expected operating velocity for the conveyor as shown in the appropriate section of the knowledge base 14036. Upon a determination that the conveyor is operating at an unexpected velocity, the intelligent systems 14088, such as through the handheld device or through a collective processing mind in communication with the handheld device (e.g., the collective processing mind located within the third zone of the manufacturing facility) may alert workers in the area of the conveyor that the conveyor may not be functioning as intended. The alert may be represented as a warning notification so as to prevent sudden emergency action from being taken. In such a scenario, a worker may see the alert and update the knowledge base 14036 to reflect the unexpected velocity measurement.

Disclosed herein are systems for using handheld devices for data collection in an industrial environment. As used herein, handheld device integration refers to using handheld devices for specific or general purposes. For example, handheld device integration as described with respect to the functionality or configuration of a system refers to the use by that system of the handheld devices 14072 and/or the hardware and/or software used in connection with the handheld devices 14072 for data collection within an industrial IoT environment, as shown in FIGS. 168 to 171. Such use of handheld devices refers to the use of one or more of the handheld devices 14072. For example, a system disclosed herein as using a handheld device may include using one or more of a mobile phone, laptop computer, tablet computer, personal digital assistant, walkie-talkie, radio, long or short range communication device, flashlight, or other types of handheld devices.

In embodiments, a system for using a handheld device for data collection in an industrial environment having the use of an analog cross point switch for collecting variable groups of analog sensor inputs is disclosed.

In embodiments, a system for using a handheld device for data collection in an industrial environment having IP front signal conditioning on a multiplexer for improved signal-to-noise ratio is disclosed.

In embodiments, a system for using a handheld device for data collection in an industrial environment having multiplexer continuous monitoring alarming features is disclosed.

In embodiments, system for data collection in an industrial environment having the use of distributed CPLD chips with dedicated bus for logic control of multiple MUX and data acquisition sections is disclosed.

In embodiments, a system for using a handheld device for data collection in an industrial environment having high-amperage input capability using solid state relays and design topology is disclosed.

In embodiments, system for using a handheld device for data collection in an industrial environment having power-down ability of at least one of an analog sensor channel and a component board is disclosed.

In embodiments, a system for using a handheld device for data collection in an industrial environment having unique electrostatic protection for trigger and vibration inputs is disclosed.

In embodiments, a system for using a handheld device for data collection in an industrial environment having precise voltage reference for A/D zero reference is disclosed.

In embodiments, a system for using a handheld device for data collection in an industrial environment having a phase-lock loop band-pass tracking filter for obtaining slow-speed RPMs and phase information is disclosed.

In embodiments, a system for using a handheld device for data collection in an industrial environment having digital derivation of phase relative to input and trigger channels using on-board timers is disclosed.

In embodiments, a system for using a handheld device for data collection in an industrial environment having a peak-detector for auto-scaling that is routed into a separate analog-to-digital converter for peak detection is disclosed.

In embodiments, a system for using a handheld device for data collection in an industrial environment having routing of a trigger channel that is either raw or buffered into other analog channels is disclosed.

In embodiments, a system for using a handheld device for data collection in an industrial environment having the use of higher input oversampling for delta-sigma A/D for lower sampling rate outputs to minimize AA filter requirements is disclosed.

In embodiments, a system for using a handheld device for data collection in an industrial environment having the use of a CPLD as a clock-divider for a delta-sigma analog-to-digital converter to achieve lower sampling rates without the need for digital resampling is disclosed.

In embodiments, a system for using a handheld device for data collection in an industrial environment having long blocks of data at a high-sampling rate as opposed to multiple sets of data taken at different sampling rates is disclosed.

In embodiments, a system for using a handheld device for data collection in an industrial environment having storage of calibration data with maintenance history on-board card set is disclosed.

In embodiments, a system for using a handheld device for data collection in an industrial environment having a rapid route creation capability using hierarchical templates is disclosed.

In embodiments, a system for using a handheld device for data collection in an industrial environment having intelligent management of data collection bands is disclosed.

In embodiments, a system for using a handheld device for data collection in an industrial environment having a neural net expert system using intelligent management of data collection bands is disclosed.

In embodiments, a system for using a handheld device for data collection in an industrial environment having use of a database hierarchy in sensor data analysis is disclosed.

In embodiments, a system for using a handheld device for data collection in an industrial environment having an expert system GUI graphical approach to defining intelligent data collection bands and diagnoses for the expert system is disclosed.

In embodiments, a system for using a handheld device for data collection in an industrial environment having a graphical approach for back-calculation definition is disclosed.

In embodiments, a system for using a handheld device for data collection in an industrial environment having proposed bearing analysis methods is disclosed.

In embodiments, a system for using a handheld device for data collection in an industrial environment having torsional vibration detection/analysis utilizing transitory signal analysis is disclosed.

In embodiments, a system for using a handheld device for data collection in an industrial environment having improved integration using both analog and digital methods is disclosed.

In embodiments, a system for using a handheld device for data collection in an industrial environment having adaptive scheduling techniques for continuous monitoring of analog data in a local environment is disclosed.

In embodiments, a system for using a handheld device for data collection in an industrial environment having data acquisition parking features is disclosed.

In embodiments, a system for using a handheld device for data collection in an industrial environment having a self-sufficient data acquisition box is disclosed.

In embodiments, a system for using a handheld device for data collection in an industrial environment having SD card storage is disclosed.

In embodiments, a system for using a handheld device for data collection in an industrial environment having extended onboard statistical capabilities for continuous monitoring is disclosed.

In embodiments, a system for using a handheld device for data collection in an industrial environment having the use of ambient, local and vibration noise for prediction is disclosed.

In embodiments, a system for using a handheld device for data collection in an industrial environment having smart route changes route based on incoming data or alarms enable simultaneous dynamic data for analysis or correlation is disclosed.

In embodiments, a system for using a handheld device for data collection in an industrial environment having smart ODS and transfer functions is disclosed.

In embodiments, a system for using a handheld device for data collection in an industrial environment having hierarchical multiplexer is disclosed.

In embodiments, a system for using a handheld device for data collection in an industrial environment having identification sensory overload is disclosed.

In embodiments, a system for using a handheld device for data collection in an industrial environment having RF identification and an inclinometer is disclosed.

In embodiments, a system for using a handheld device for data collection in an industrial environment having continuous ultrasonic monitoring is disclosed.

In embodiments, a system for using a handheld device for data collection in an industrial environment having cloud-based, machine pattern recognition based on fusion of remote, analog industrial sensors is disclosed.

In embodiments, a system for using a handheld device for data collection in an industrial environment having cloud-based, machine pattern analysis of state information from multiple analog industrial sensors to provide anticipated state information for an industrial system is disclosed.

In embodiments, a system for using a handheld device for data collection in an industrial environment having cloud-based policy automation engine for IoT, with creation, deployment and management of IoT devices is disclosed.

In embodiments, a system for using a handheld device for data collection in an industrial environment having on-device sensor fusion and data storage for industrial IoT devices is disclosed.

In embodiments, a system for using a handheld device for data collection in an industrial environment having a self-organizing data marketplace for industrial IoT data is disclosed.

In embodiments, a system for using a handheld device for data collection in an industrial environment having self-organization of data pools based on utilization and/or yield metrics is disclosed.

In embodiments, a system for using a handheld device for data collection in an industrial environment having training AI models based on industry-specific feedback is disclosed.

In embodiments, a system for using a handheld device for data collection in an industrial environment having a self-organized swarm of industrial data collectors is disclosed.

In embodiments, a system for using a handheld device for data collection in an industrial environment having an IoT distributed ledger is disclosed.

In embodiments, a system for using a handheld device for data collection in an industrial environment having a self-organizing collector is disclosed.

In embodiments, a system for using a handheld device for data collection in an industrial environment having a network-sensitive collector is disclosed.

In embodiments, a system for using a handheld device for data collection in an industrial environment having a remotely organized collector is disclosed.

In embodiments, a system for using a handheld device for data collection in an industrial environment having a self-organizing storage for a multi-sensor data collector is disclosed.

In embodiments, a system for using a handheld device for data collection in an industrial environment having a self-organizing network coding for multi-sensor data network is disclosed.

In embodiments, a system for using a handheld device for data collection in an industrial environment having a wearable haptic user interface for an industrial sensor data collector, with vibration, heat, electrical and/or sound outputs is disclosed.

In integrations, a system for using a handheld device for data collection in an industrial environment having heat maps displaying collection data for AR/VR is disclosed.

In embodiments, a system for using a handheld device for data collection in an industrial environment having automatically tuned AR/VR visualization of data collected by a data collector is disclosed.

In embodiments, an intelligent system for using a handheld device and having processing, communications, and other IT components for remote monitoring and control is disclosed.

In embodiments, an intelligent system for using a handheld device and having a hydrogen fuel generating electrolyzer that operates on a water source to separate hydrogen and oxygen components is disclosed.

In embodiments, an intelligent system for using a handheld device and having a low-pressure hydrogen storage system that stores the hydrogen generated by an electrolyzer is disclosed.

In embodiments, an intelligent system for using a handheld device and having a fuel control module that automatically controls fuel sourcing or mixing devices based on some measure of historical, current, planned, and/or anticipated consumption or availability is disclosed.

In embodiments, an intelligent system for using a handheld device and having a solar-powered hydrogen electrolyzer is disclosed.

In embodiments, an intelligent system for using a handheld device and having a wind-powered hydrogen electrolyzer is disclosed.

In embodiments, an intelligent system for using a handheld device and having a hydro-powered hydrogen electrolyzer is disclosed.

In embodiments, an intelligent system for using a handheld device and having an on-demand gas-LPG hybrid burner that sources LPG, hydrogen, or other fuel dynamically without need for user input or monitoring is disclosed.

In embodiments, an intelligent system for using a handheld device and having an enclosed burner chamber that provides heat in a target heat-zone as a plane of heat is disclosed.

In embodiments, an intelligent system for using a handheld device and having a smart knob with connectivity and local and remote control for controlling the intelligent cooktop device or other IoT devices is disclosed.

In embodiments, an intelligent system for using a handheld device and having a mobile docking facility with power for charging a mobile device, data communications, and heat protection is disclosed.

In embodiments, an intelligent system for using a handheld device and having distributed modules or components that are located in sub-systems of the cooktop is disclosed.

In embodiments, an intelligent system for using a handheld device and having a centralized control facility to manage operation of sub-systems of the cooktop is disclosed.

In embodiments, an intelligent system for using a handheld device and having remote control capability is disclosed.

In embodiments, an intelligent system for using a handheld device and having automation is disclosed.

In embodiments, an intelligent system for using a handheld device and having detectors and sensors for monitoring cooking system conditions is disclosed.

In embodiments, an intelligent system for using a handheld device and having machine learning for optimizing cooking system operation is disclosed.

In embodiments, an intelligent system for using a handheld device and having a mobile application is disclosed.

In embodiments, an intelligent system for using a handheld device and having a cloud-based platform that interacts with electronic devices and participants in a related ecosystem of suppliers, content providers, service providers, and regulators to deliver value-added services to users of the intelligent cooking system, users of the hydrogen production system, and other participants of the ecosystem is disclosed.

In embodiments, an intelligent system for using a handheld device and having a recommendation engine for providing recommendations to users is disclosed.

In embodiments, an intelligent system for using a handheld device and having a notification engine for providing notifications to users is disclosed.

In embodiments, an intelligent system for using a handheld device and having an advertising engine for providing location-based offers to users is disclosed.

In embodiments, an intelligent system for using a handheld device and having interfaces that allow machine-to-machine or user-to-machine communication with other devices and the cloud, for contributing data for analytics, monitoring, control, and operation of other devices and systems is disclosed.

In embodiments, an intelligent system for using a handheld device and having a user interface that facilitates contextual and intelligence-driven personalized experience for computing devices that connect to a network based around the intelligent cooking system is disclosed.

In embodiments, an intelligent system for using a handheld device and having analytics for profiling, recording or analyzing users, usage of the device, maintenance and repair histories, patterns relating to patterns or faults, energy use patterns, cooking patterns, and deployment, use, and service of electrolyzer is disclosed.

In embodiments, an intelligent system for using a handheld device and having a commerce utility for ordering ingredients, components, and materials is disclosed.

In embodiments, an intelligent system for using a handheld device and having a cooking assistance utility for assisting users with cooking tasks is disclosed.

In embodiments, an intelligent system for using a handheld device and having a health utility for providing health indices for foods, nutritional information, nutritional search capabilities, nutritional assistance, and personalized suggestions and recommendations is disclosed.

In embodiments, an intelligent system for using a handheld device and having an infotainment utility for playing music, videos, and/or podcasts is disclosed.

In embodiments, an intelligent system for using a handheld device and having a broadcasting utility for enabling a personalized cooking channel that is broadcast from the cooking system is disclosed.

In embodiments, an intelligent system for using a handheld device and having a food investigation utility for gathering information from smart cooktops and user activity about recipes being used by users of the smart cooktop systems throughout a region is disclosed.

In embodiments, a system for using a handheld device for data collection in an industrial environment having an IoT platform is disclosed.

In embodiments, a system for using a handheld device for data collection in an industrial environment having an IoT data adapter for receiving data inputs and establishing a connection with one or more available IoT cloud platforms to publish the data is disclosed.

In embodiments, a system for using a handheld device for data collection in an industrial environment having a condition detector for detecting conditions related to connect attempts made by the IoT data adapter to one or more IoT cloud platforms is disclosed.

In embodiments, a system for using a handheld device for data collection in an industrial environment having an IoT data adapter with an adaptation engine is disclosed.

In embodiments, a system for using a handheld device for data collection in an industrial environment having the use of machine learning to prepare a data packet or stream is disclosed.

In embodiments, a system for using a handheld device for data collection in an industrial environment having a data marketplace that provides a pool of available cloud networking platforms is disclosed.

In embodiments, a system for using a handheld device for data collection in an industrial environment having a messaging utility that provides a cloud platform user interface with a message indicating the availability of a new data source and data source integration and usage instructions is disclosed.

In embodiments, a system for using a handheld device for data communication between nodes having the ability to maintain a first and second transmission limit based on received rate of arrival and success of delivery feedback messages, and limiting transmission of messages based on the transmission limits is disclosed.

In embodiments, a system for using a handheld device for data communication between nodes having the ability to limit transmission of further messages not yet acknowledged as successfully delivered according to the window size is disclosed.

In embodiments, a system for using a handheld device for data communication between nodes having the ability to maintain an estimate of a rate of loss events and use it to adjust the rate of redundancy messages is disclosed.

In embodiments, a system for using a handheld device for data communication between nodes having an estimated rate of loss events where the error correction code used to determine redundancy messages chosen is based on the estimated rate of loss events is disclosed.

In embodiments, a system for using a handheld device for data communication between nodes having the ability to apply forward error correction based on messages received describing channel characteristics is disclosed.

In embodiments, a system for using a handheld device for data communication between nodes having the ability to maintain/set timers based on occurrences of delivery order events and delaying transmission of feedback messages using timers is disclosed.

In embodiments, a system for using a handheld device for data communication between nodes having the ability to maintain/set timers based on occurrences of delivery order events and delaying modification of congestion window size based on timers is disclosed.

In embodiments, a system for using a handheld device for data communication between nodes having the ability to maintain/set timers based on occurrences of delivery order events, delaying modification of congestion window size based on timers, and cancelling modification of congestion window size when receiving a feedback message indicating successful delivery is disclosed.

In embodiments, a system for using a handheld device for data communication between nodes having the ability to configure a new connection using maintained data characterizing a current/previous connection is disclosed.

In embodiments, a system for using a handheld device for data communication between nodes having the ability to configure a new connection using maintained data characterizing an error rate of a current/previous connection is disclosed.

In embodiments, a system for using a handheld device for data communication between nodes having the ability to configure a new connection using maintained data characterizing a timing variability of a current/previous connection is disclosed.

In embodiments, a system for using a handheld device for data communication between nodes having the ability to configure a new connection using maintained data characterizing bandwidth of a current/previous connection is disclosed.

In embodiments, a system for using a handheld device for data communication between nodes having the ability to configure a new connection using maintained data characterizing round trip time of a current/previous connection is disclosed.

In embodiments, a system for using a handheld device for data communication between nodes having the ability to configure a new connection using maintained data characterizing communication control parameters of a current/previous connection is disclosed.

In embodiments, a system for using a handheld device for data communication between nodes having the ability to configure new connection using maintained data characterizing forward error correction parameters of a current/previous connection is disclosed.

In embodiments, a system for using a handheld device for data communication between nodes having a data store for maintaining data characterizing one or more current or previous data communication connections and a connection initiation module for initiating new data communication connections based on maintained data is disclosed.

In embodiments, a system for using a handheld device for data communication between nodes having the ability to transmit a first subset of data messages over a lower latency data path and a second subset of messages over a higher latency data path is disclosed.

In embodiments, a system for using a handheld device for data communication between nodes having the ability to transmit a first subset of data messages that are time critical over a lower latency data path and a second subset of messages over a higher latency data path is disclosed.

In embodiments, a system for using a handheld device for data communication between nodes having the ability to transmit a first initial subset of data messages over a lower latency data path and a second subset of messages that are subsequently available over a higher latency data path is disclosed.

In embodiments, a system for using a handheld device for data communication between nodes having the ability to transmit a first subset of acknowledgment messages over a lower latency data path and a second subset of data messages over a higher latency data path is disclosed.

In embodiments, a system for using a handheld device for data communication between nodes having the ability to transmit a first subset of supplemental/redundancy data messages over a lower latency data path and a second subset of data messages over a higher latency data path is disclosed.

In embodiments, a system for using a handheld device for data communication between nodes having a degree of redundancy associated with each message that is based on message position in the transmission order is disclosed.

In embodiments, a system for using a handheld device for data communication between nodes having a degree of redundancy associated with each message that increases as the position of the messages is non-decreasing is disclosed.

In embodiments, a system for using a handheld device for data communication between nodes having a degree of redundancy associated with each message that is based on message position in the transmission order and in response to receiving feedback messages is disclosed.

In embodiments, a system for using a handheld device for data communication between nodes having a degree of redundancy associated with each message that is based on message position in the transmission order and in response to receiving feedback messages, and adding or removing redundancy messages from the queue based on the feedback messages is disclosed.

In embodiments, a system for using a handheld device for data communication between nodes having the ability to adjust the number of messages sent over each of multiple different data paths with different communication protocols if it is determined that a data path is altering flow of messages is disclosed.

In embodiments, a system for using a handheld device for data communication between nodes having the ability to adjust the number of messages sent over each of multiple different data paths with different communication protocols if it is determined that a data path is altering flow of messages initial division based on previous communication connections is disclosed.

In embodiments, a system for using a handheld device for data communication between nodes having the ability to modify/add/remove redundancy information associated with encoded data as it travels from node to node via channels based on channel characteristics is disclosed.

In embodiments, a system for using a handheld device for data communication between nodes having the ability to send FEC packets at an estimated rate of loss events (isolated packet loss or burst of consecutive packets) is disclosed.

In embodiments, a system for using a handheld device for data communication between nodes having combined coding, TCP, and pacing of packet transmissions is disclosed.

In embodiments, a system for using a handheld device for data communication between nodes having a forward error correction code construction that interleaves groups of message packets and parity packets and has coding across overlapping groups of message packets is disclosed.

In embodiments, a system for using a handheld device for data communication between nodes having a variant of TCP that combines delay-based back-off with a stable window increase function is disclosed.

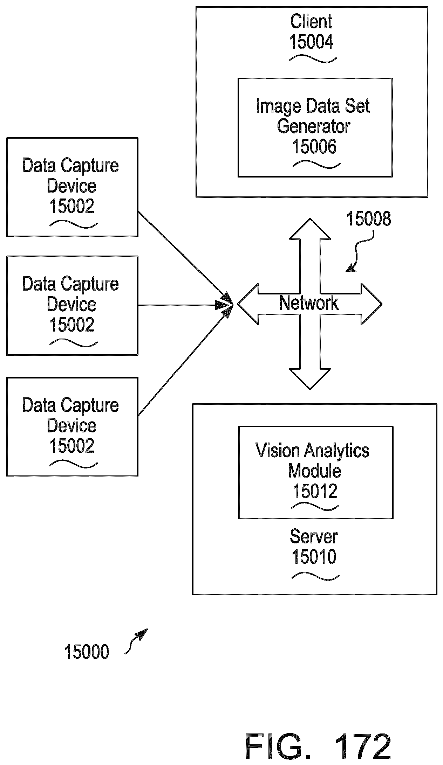

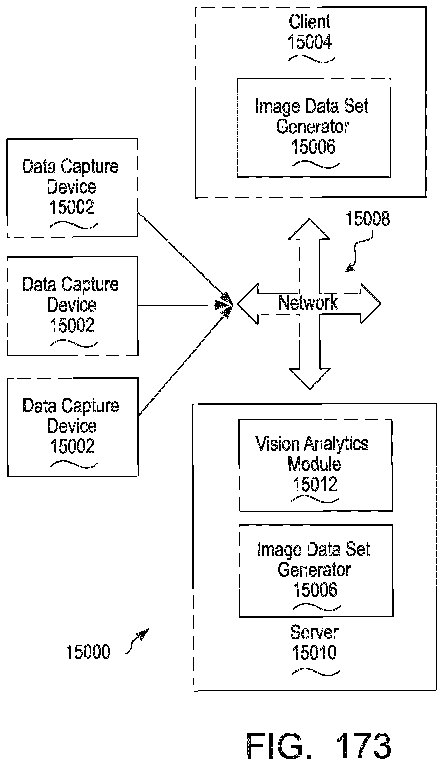

Systems and methods for identifying operating characteristics, such as vibration, of one or more targets, as described and which may be referred to herein as devices, within an industrial IoT environment using image data sets are described with respect to FIGS. 172 - 174. In embodiments, a system, such as a computer vision system 15000 generally illustrated in Figure. 172, is configured to detect vibration or other operating characteristics (e.g., vibration, heat, electromagnetic emissions, or other suitable operating characteristics) of the one more targets in the industrial IoT environment (e.g., as described above) using one or more image data sets. The one or more targets may include the devices 13006, as described above. The devices 13006 may include agitators, including turbine agitators, airframe control surface vibration devices, catalytic reactors and compressors. The devices 13006 may also include conveyors and lifters, disposal systems, drive trains, fans, irrigation systems and motors.

The devices 13006 may also include pipelines, electric powertrains, production platforms, pumps (e.g., water pumps), robotic assembly systems, thermic heating systems, tracks, transmission systems and turbines. The devices 13006 may operate within a single industrial environment 13018 or multiple industrial environments 13018. For example, a pipeline device may operate within an oil and gas environment, while a catalytic reactor may operate in either an oil and gas production environment or a pharmaceutical environment. In embodiments, an operator, as described throughout this disclosure, operating, supervising, inspecting, or a combination thereof, one or more of the devices 13006 may use the computer vision system 15000 to analyze the operation of the one or more devices 13006. In embodiments, the operator may review data, reports, charts, or other suitable output from the computer vision system 15000 to determine whether maintenance, repair, or other suitable interaction with the one or more devices 13006 is required. For example, the output from the computer vision system 15000 may indicate that vibration associated with one of the devices 13006 may lead to a failure if a particular component of the device 13006 is not replaced or repaired within a particular timeframe. In embodiments, the computer vision system 15000 may be configured to analyze image data sets, as will be described, and identify one or more issues (e.g., faults or potential failures of one or more components), determine a corrective action (e.g., alter an operating speed of a device associated with the faulty or failing component), and initiate the corrective action (e.g., automatically analyze data, identify issues, determine corrective action, and carry out, at least part of, the corrective action).

A computer vision system, such as the computer vision system 15000, may be adapted to automate tasks and/or features of human visual systems. For example, the computer vision system 15000 may be configured to capture image data associated with the devices 13006 and analyze the image data using various visual techniques that simulate and improve on aspects of human sight and analysis. For example, unlike human sight, the computer vision system 15000 may enhance an image by zooming in on an object, analyzing individual frames and deltas between frames. In another example, the computer vision system 15000 may also capture images outside the typical human perceptible range, such as ultra-violet or infra-red signals. The computer vision system 15000 may then identify various characteristics of the devices 13006, such as the presence or amount of undesirable vibration, using the visual techniques. The computer vision system 15000 may be trained, such as by a human operator or supervisor, or based on a data set, model, or the like. Training may include presenting the computer vision system 15000 with one or more training data sets that represent values, such as sensor data, event data, parameter data, and other types of data (including the many types described throughout this disclosure), as well as one or more indicators of an outcome, such as an outcome of a process, an outcome of a calculation, an outcome of an event, an outcome of an activity, or the like. Training may include training in optimization, such as training the computer vision system 15000 to optimize one or more systems based on one or more optimization approaches, such as Bayesian approaches, parametric Bayes classifier approaches, k-nearest-neighbor classifier approaches, iterative approaches, interpolation approaches, Pareto optimization approaches, algorithmic approaches, and the like. Feedback may be provided in a process of variation and selection, such as with a genetic algorithm that evolves one or more solutions based on feedback through a series of rounds. Feedback may be determined and provided by a human operator or by another component of a monitoring system.

In embodiments, the computer vision system 15000 may be trained using training data sets that include visual and/or non-visual data to identify operating characteristics of the devices 13006 using the data captured by one or more data capture devices 15002. In embodiments, the training data sets may include image data corresponding to various operating states of components of the devices 13006. For example, the training data sets may include image data corresponding to components of the devices 13006 operating within expected or acceptable conditions or tolerances, image data corresponding to components of the devices 13006 operating beyond the expected or acceptable conditions or tolerances, image data corresponding to components of the devices 13006 operating within the expected or acceptable conditions or tolerances, but are trending toward not operating within the expected or acceptable conditions or tolerances.

In embodiments, the training data sets may be generated based on image data of the components of the devices 13006 or similar devices and data captured various sensors (e.g., vibration sensors as described throughout this disclosure). For example, the training data sets may include a correlation of image data with sensed vibrations of components of the devices 13006 (e.g., image data indicating a component is operating within the expected or acceptable conditions or tolerances may be correlated with sensed vibration data that indicates the vibration is expected or acceptable).

In embodiments, the computer vision system 15000 may capture data from the devices 13006 (e.g., image data), using various visual input devices. For example, the data capture devices 15002 may capture data, such as visual or image data, during operation of the devices 13006. For example, the data captures devices 15002 may capture a plurality of images over a period of time (e.g., during which the devices 13006 are operating). The data capture devices 15002 may capture images of the devices 13006 at any suitable interval during the period. For example, the data capture devices 15002 may capture an image once per second, once per a fraction of a second, or any suitable interval during the period. In embodiments, the data capture devices 15002 may capture raw image data. Raw image data may include a signal image, a partial image, data points that represent an image, or other suitable raw image data. In embodiments, the data capture devices 15002 may encode the raw image data using any suitable image encode techniques.

The data capture devices 15002 may include cameras, sensors, other image capture devices, other data capture devices, or a combination thereof. In embodiments, the data capture devices 15002 may include one or more full spectrum cameras configured to capture image data that includes visible light image data and/or non-visible light image data, including infrared image data, ultraviolet image data, other non-visible image data, or a combination thereof. In embodiments, the data capture devices 15002 may include one or more radiation imaging devices, such as an X-ray imaging device or other suitable radiation imaging device. The one or more radiation imaging devices may be configured to capture image data of the devices 13006 during operation of the devices 13006 using X-ray imaging or other suitable radiation imaging. In embodiments, the data capture devices 15002 may include one or more sonic capture device configured to capture image data of the devices 13006 during operation of the devices 13006 using sound waves, such as ultrasonic sound waves or other suitable sound waves. In embodiments, the data capture devices 15002 may include a light imaging, detection, and ranging (LIDAR) device configured to capture image data of the devices 13006 during operation of the devices 13006 by measuring the distance to a target by illuminating the target with a pulsed light and measuring the reflected pulses with one or more sensors. In embodiments, the data capture devices 15002 may include a point cloud data capture device configured to capture image data of the devices 13006 during operation of the devices 13006 using lasers or other suitable light to generate a set of data points represent a 3-dimensional model of the devices 13006.

In embodiments, the data capture devices 15002 may include an infrared inspection device configured to capture image data of the devices 13006 during operation of the devices 13006 using infrared imaging. In embodiments, the data capture devices 15002 may include a digital image capturing device, such as a digital camera, configured to capture image data of the devices 13006 during operation of the devices 13006 using visible light. For example, an operator operating, supervising, monitoring, and/or inspecting one or more of the devices 13006 may utilize a mobile device, such as a mobile phone, smart phone, tablet computer, or other suitable mobile device. The mobile device may include an image capture device, such as a digital camera. The operator may capture image data associated with the image capture device of the mobile device. In embodiments, the data capture device 15002 may be a stand-alone device that captures image data, as described, and communicates the captured image data to a client, a server, or a combination thereof, as will be described.

In embodiments, one or more data capture devices 15002 may be positioned at or near a respective device 13006 at predefined distances and locations with respect to the respective device 13006. The predefined distances and locations at which the one or more data capture devices 15002 are positioned, or disposed, may be selected such that the one or more of the data capture devices 15002 has a desired field of data capture of a point of interest of the respective device 13006. The point of interested may include any suitable point or areas of the respective device 13006. For example, the point of interest may include a belt, bearing, blade, vane, fan, or any other suitable component, point or area of interest on or related to the respective device 13006. The field of data capture may include a field of vision for an image data capture device 15002, a field of sonic data capture for a sonic data capture device 15002, or other suitable field of data capture. The data captured from the combine fields of data capture from each respective data capture device positioned at or near the respective device 13006 may be used, as will be described, by the image data set generator 15006 to generate one or more image data sets that represent images of the point of interest of the respective device 13006. In embodiments, the data capture devices 15002 may include any combination of the devices described herein or other suitable data capture devices not described.

In embodiments, the data capture devices 15002 may capture image data of the devices 13006, as described, and communicate the captured image data to a client 15004 and/or a server 15010 using a network 15008. The client 15004 may include any suitable client including those described throughout this disclosure. In embodiments, the client 15004 may be a mobile device, or other suitable client. The client may include a processor configured to execute instructions (e.g., instructions that, when executed by the processor, cause the processor to execute various portions of the computer vision system 15000 or various methods described herein) stored on a memory. The client 15004 may be owned, operated, and/or utilized by an operator working on or near the devices 13006, as described throughout this disclosure. The network 15008 may be any suitable network, including any network described throughout this disclosure, including, but not limited to, the Internet, a cloud network, a local area network, a wide area network, a wireless network, a wired network, a cellular network, and the like, or any combination thereof. The server 15010 may be any suitable server, including any server described throughout this disclosure. The server 15010 may include a processor configured to execute instructions (e.g., instructions that, when executed by the processor, cause the processor to execute various portions of the computer vision system 15000 or various methods described herein) stored on a memory. The server 15010 may be a stand-alone server or a group of servers. The server 15010 may be a dedicated server or one of a distributed computing servers or a cloud server, and the like, or any combination thereof.

In embodiments, the computer vision system 15000 may include an image data set generator 15006. The image data set generator 15006 may comprise an application or other suitable software or program capable of being executed on the client 15004 and/or the server 15010. In embodiments, the client 15004 may be configured to execute the image data set generator 15006. For example, an operator, as described, may carry the client 15004 as the operator interacts with a first devices 13006. One or more of the data capture devices 15002 may be configured to capture image data, as described, associated with the first device 13006. For example, a first data capture device 15002 may be disposed near the first device 13006, such that, the first data capture device 15002 has a field of data capture, as described, to a point of interest on the first device 13006. The first data capture device 15002 may capture raw image data associated with the first device 13006. The first data capture device 15002 may communicate, via the network 15008, the raw image data to the client 15004. The image data set generator 15006 may generate one or more image data sets, as will be described, using the raw image data. In some embodiments, the server 15010 may be configured to execute the image data set generator 15006, as is generally illustrated in Figure 152. The first data capture device 15002 may communicate, via the network 15008, the raw image data to the server 15010. The image data set generator 15006, being executed by the server 15010, may generate one or more image data sets, as will be described, using the raw image data.

In embodiments, the image data set generator 15006 may be configured to generate one or more image data sets using raw image data received from the one or more data capture devices 15002. The image data sets may include images that include data capable (e.g., in a suitable format) of being analyzed or processed by the vision analytics module 15012, as will be described. The image data set generator 15006 may be configured to decode raw image data. For example, as described, the one or more data capture devices 15002 may encode raw image data before communicating the encoded raw image data to the client 15004 and/or the server 15010. The image data set generator 15006 may be configured to decode the raw image data using any suitable image decoding techniques. In some embodiments, the image data set generator 15006 may be configured to correlate related raw image data, stitch raw image data (e.g., by using multiple images from one or more data capture devices 15002 to create a single image of a point of interest on one of the devices 13006), or generate image data sets using any suitable image data set generation techniques, and/or any suitable image processing techniques.

In embodiments, the image data set generator 15006 may generate the image data sets from raw data comprising data other than visible light image data. For example, as described, the data capture devices 15002 may capture data such as sonic data, non-visible light data, and other various data. The image data set generator 15006 may receive the non-image raw data and convert the non-image raw data into image data. For example, the image data set generator 15006 may generate one or more images of the point of interest of the device 13006 using sound waves captured by one or more data capture devices 15002. The image data set generator 15006 may generate the image data set using any suitable technique. The image data set generator 15006 may communicate the one or more image data sets to a vision analytics module 15012.

In embodiments, the vision analytics module 15012 may be an application or other suitable software capable of being executed on the server 15010. While the vision analytics module 15012 is illustrated and described as being executed by the server 15010, it should be understood that the client 15004 may be configured to execute the vision analytics module 15012.

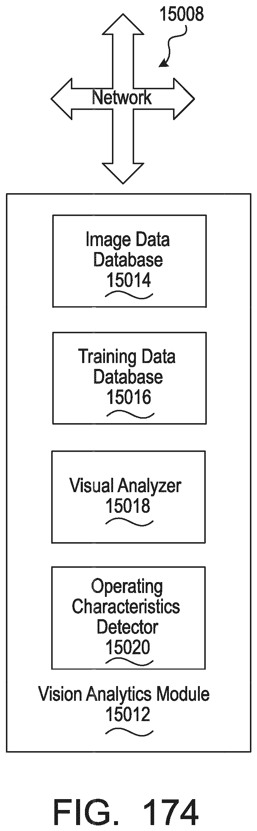

As is generally illustrated in Figure 174, the vision analytics module 15012 may include an image data database 15014, a training data database 15016, a visual analyzer 15018, and an operating characteristics detector 15020. In embodiments, the image data database 15014 may include any suitable database and may be disposed locally on the client 15004 and/or the server 15010, remotely from either of the client 15004 and the server 15010, or other suitable location. The image data database 15014 may store the image data sets generated by the image data set generator 15006, as described. For example, the image data set generator 15006 may generate one or more image data sets, as described, and communicate the one or more image data sets to the image data database 15014. In embodiments, the image data database 15014 may be any suitable image repository configured to store the image data sets.

The training data database 15016 may include any suitable database and may be disposed locally on the client 15004 and/or the server 15010, remotely from either of the client 15004 and the server 15010, or other suitable location. The training data database 15016 may store the training data sets generated by a deep learning system, as will be described. In embodiments, the training data database 15016 may be any suitable training data repository configured to store the training data sets. The training data sets may include any suitable training data sets. For example, the training data sets may be generated by a deep learning system, as will be described, using various suitable image data sets, such as image data sets representing portions of the devices 13006, portions of other devices, image data sets representing motion, vibration, or other various characteristics of the devices 13006 or other devices, or any other suitable image data sets or other data sets.

In embodiments, the training data sets may be used to train the computer vision system 15000 to detect the various operating characteristics of the devices 13006. For example, as will be described, the deep learning system may train the visual analyzer 15018 to identify various data points of the image data sets, such as, anomalies, features, characteristics, or other suitable data points. In embodiments, the visual analyzer 15018 may be trained by any suitable training system, such as a machine learning system, an artificial intelligence training system, deep learning system, programed by a human programmer, or configured, trained, programed, etc. using any suitable techniques, methods, and/or systems. For example, the visual analyzer 15018 may be configured to identify a portion of a point of interest of a respective device 13006 represented in an image data set. For example, the visual analyzer 15018 may identify a portion of a belt of the respective device 13006 represented by the image data set. The visual analyzer 15018 may be configured to analyze the portion of the point of interest and determine whether the characteristics (e.g., position, size, shape, and/or other suitable characteristics) of the portion of the point of interest corresponds to predicted or predetermined characteristics of the portion of the point of interest. For example, the visual analyzer 15018 may identify the portion of the point of interest in one of a plurality of images associated with the image data set. The visual analyzer 15018 may record values corresponding to various characteristics of the portion of the point of interest associated with each of the plurality of images of the image data set. For example, the visual analyzer 15018 may record a position of a portion of a belt of the respective device 13006 in each image of the plurality of successive images of the image data set and may track the delta in the position of the belt in the successive images.

The predicted or predetermined characteristics may be predicted or predetermined based on the training data sets and may correspond to characteristics of the portion for the point of interest where the portion of the point of interest indicates that the respective device 13006 is operating within acceptable or expected tolerances. For example, the predicted or predetermined characteristics of the portion of the point of interest may include a position of a portion of a belt while the respective device 13006 is operating. The position of the belt may correspond to an expected operating position of the belt while the respective device 13006 is operating (e.g., where the portion of the belt is expected to be while the respective device 13006 is operating according to acceptable operating tolerances). While various examples are described, it should be understood that the visual analyzer 15018 may use any suitable characteristics of the portion of the point of interest to analyze the image data sets.

In embodiments, the visual analyzer 15018 may compare the recorded characteristics of the portion of the point of interest with the predicted or predetermined characteristics of the portion of the point of interest. The visual analyzer 15018 may be configured (e.g., trained, configured, programmed, etc., as described above), to generate analytics of the portion of the point of interest based on the comparison of the recorded characteristics of the portion of the point of interest with the predicted or predetermined characteristics of the portion of the point of interest. For example, the visual analyzer 15018 may determine a variance between a recorded position of the portion of the point of interest and a predicted or predetermined position of the portion of the point of interest (e.g., a variance between an actual or observed position of, for example, the belt of the respective device 13006 a predicted or predetermined position of the belt of the respective device 13006). As described, the image data set may include a plurality of images of the portion of the point of interest captured over a period. The visual analyzer 15018 may determine a first variance between a first recorded characteristic of the portion of the point of interest and a first predicted or predetermined characteristic of the portion of the point of interest at a first interval during the period (e.g., using a first image captured during the first interval). The visual analyzer 15018 may then determine a second variance between a second recorded characteristic of the portion of the point of interest and a second predicted or predetermined characteristic of the portion of the point of interest at a second interval during the period (e.g., using a second image captured during the second interval). The visual analyzer 15018 may continue to determine variances for a plurality of recorded characteristics and a plurality of predicted or predetermined characteristics over the period using images corresponding to intervals during the period. In this manner, the visual analyzer 15018 may generate data that represents the variance of the characteristics of the portion of the point of interest with respect to the predicted or predetermined characteristics of the portion of the point of interest overtime. For example, the visual analyzer 15018 may generate data that represents the difference in the actual or observed position of the belt compared to the predicted or predetermined position of the belt over a period of time. The visual analyzer 15018 may quantize the variance. For example, the visual analyzer 15018 may be configured to determine a value representing the variance between the recorded characteristics and the predicted or predetermined characteristics (e.g., a value representing a distance between a recorded position of the belt and a predicted or predetermined position of the belt). In embodiments, the visual analyzer 15018 may be configured to generate a variance data set that includes values representing the variances between the recorded characteristics of the portion of the point of interest and the predicted or predetermined portion of the point of interest. The visual analyzer 15018 may communicate the variance data set to the operating characteristics detector 15020.

In embodiments, the operating characteristics detector 15020 may be located or disposed on the vision analytics module 15012 or located or disposed remotely from the vision analytics module 15012. In embodiments, the operating characteristics detector 15020 may be configured to determine or identify various operating characteristics of the respective device 13006, or any suitable device 13006, based on the variance data set. The various operating characteristics may include vibration, heat, distortion, deflection, other suitable operating characteristics, or a combination thereof of the portion of the point of interest during operating of the respective device 13006, vibration, heat, distortion, deflection, other suitable operating characteristics, or a combination thereof of other portions of the respective device 13006, other suitable operating characteristics of the respective device 13006, or a combination thereof. As described, the operating characteristics detector 15020 may be trained by any suitable training system, such as a machine learning system, an artificial intelligence training system, deep learning system, programed by a human programmer, or configured, trained, programed, etc. using any suitable techniques, methods, and/or systems. In embodiments, the operating characteristics detector 15020 may be configured to identify operating characteristics of the portion of the point of interest by identifying various data of the variance data set that indicate quantities or other suitable measurements of one or more operating characteristics of the respective device 13006.

For example, the operating characteristics detector 15020 may identify data of the variance data set that indicates that the belt is vibrating at a first frequency (e.g., by identifying values associated with the variance data set that indicate that the position of the belt over a period of time is moving at a first frequency). The operating characteristics detector 15020 may compare the identified operating characteristics with trained or programmed operating characteristics to determine whether the operating characteristics are within operating tolerance for the respective device 13006. For example, the operating characteristics detector 15020 may compare a value associated with the operating characteristic with a threshold value (e.g., and determine whether the operating characteristic is within tolerances depending on whether the operating characteristic value is above or below the threshold), compare the value associated with the operating characteristic to a predicted value (e.g., and determine if the values are different that the operating characteristic is not operating within tolerances), or other suitable determinative analysis, or a combination thereof. For example, the operating characteristics detector 15020 may compare the frequency at which the belt is vibrating with a trained or programmed frequency. The trained or programmed frequency may include a frequency of vibration of the belt during normal or acceptable operation of the respective device 13006, a frequency of vibration of the belt that indicates the belt is vibrating beyond acceptable tolerances, a frequency of vibration that is within the normal or acceptable operation of the respective device 13006 and indicates that the belt may eventually vibrate at a frequency beyond the acceptable tolerances of the operation of the respective device 13006, or other suitable frequencies. While only vibration is described, the trained or programed operating characteristics may indicate any suitable operating characteristics of the respective device 13006. The operating characteristics detector 15020 may output (e.g., to a database, to a report, to monitor, or other suitable output location or device) an operatic characteristics data set that includes data indicating values or the operating characteristics and/or information indicating predictive (e.g., future) operating characteristics (e.g., determined based on the actual or observed operating characteristics of the portion of the point of interest and the trained or programed operating characteristic that indicate that the actual or observed operating characteristics indicate particular further operating characteristics), actual or observed operating characteristics, other suitable information or values, or a combination thereof.

In embodiments, an operator may review and/or analyze the operating characteristics data set to determine whether the respective device 13006, and/or the portion of the point of interest of the respective device 13006, is operating within expected or acceptable tolerances. Additionally, or alternatively, the operator may determine, based on the operating characteristics data set that one or more components of the respective device 13006 is faulty, will become faulty, requires maintenance, or other suitable determinations. For example, the operating characteristics data set may indicate that the belt is vibrating at a first frequency. The belt vibrating at the first frequency may indicate that a pulley associated with the belt is faulty or requires maintenance. The operator may maintain or replace the pulley based on the operating characteristics data. In embodiments, the operating characteristics detector 15020 may be configured to output information or data that indicates that a component of the respective device 13006 requires maintenance or replacement. For example, as described, the operating characteristics data set may indicate that the belt is vibrating at the first frequency. The operating characteristics detector 15020 may be configured to determine, based on the operating characteristics data set (e.g., indicating that the belt is vibrating at the first frequency), and the trained or programmed operating characteristics that the belt vibrating at the first frequency indicates that a first pulley is faulty and should be replaced or maintained. The operating characteristics detector 15020 may output the information or data to the operator, as described, who may then act on the information or data (e.g., by replacing or maintaining the first pulley).

In embodiments, the computer vision system 15000 may capture data from the respective devices 13006 (e.g., non-image data), using various non-visual input devices. For example, the data capture devices 15002 may capture data, such as temperature, pressure, chemical structure, other suitable non-visual data, or a combination thereof, during operation of the respective devices 13006. A chemical structure may include a molecular geometry representing spatial arrangements of atoms in a molecular and the chemical bonds that hold the atoms together. A chemical structure can be represented by molecular models or formulas. For example, the data captures devices 15002 may capture a plurality of measurement values over a period of time (e.g., during which the respective devices 13006 are operating). The data capture devices 15002 may capture measurements of the respective devices 13006 at any suitable interval during the period. For example, the data capture devices 15002 may capture a measurement once per second, once per a fraction of a second, or any suitable interval during the period. In embodiments, the data capture devices 15002 may capture raw measurement data. Raw measurement data may include a temperature measurement, a pressure measurement (e.g., of liquid or gas within a portion of the respective device 13006), a chemical structure measurement (e.g., of a liquid, gas, or solid within a portion of the respective device 13006), or other suitable raw measurement data. In embodiments, the data capture devices 15002 may encode the raw measurement data using any suitable measurement encoding techniques.

The data capture devices 15002 may include pressure sensors, temperature sensors, chemical sensors, fluid sensors, other sensors, other data capture devices, or a combination thereof. In embodiments, the data capture devices 15002 may include one or more pressure sensors configured to capture pressure measurement data that includes of a portion of the respective device 13006. For example, a pressure sensor may measure pressure within a vat, pipe, tank, or other suitable pressurized enclosure of the respective device 13006. In embodiments, the data capture devices 15002 may include one or more temperature sensors configured to measure temperature of a portion of the respective device 13006. For example, a temperature sensor may measure temperature of oven, kiln, vat, pipe, tank, or other suitable portions of the respective device 13006. In embodiments, the data capture devices 15002 may include one or more chemical sensors configured to measure or determine a chemical structure of a liquid, gas, or solid associated with the respective device 13006. For example, a chemical sensor may measure the chemical structure of a part manufactured by the respective device 13006, the chemical structure of cooling fluid used to cool the respective device 13006 during operation, the chemical structure of waste produced by the respective device 13006 during operation, or other suitable chemical structures of other suitable liquids, fluids, gases, or solids associated with the respective device 13006.

In embodiments, the data capture devices 15002 may be associated with a mobile device. For example, an operator operating, supervising, monitoring, and/or inspecting one or more of the respective devices 13006 may utilize a mobile device, such as a mobile phone, smart phone, tablet computer, or other suitable mobile device. The mobile device may include a data capture device, such as an add-on sensor. The operator may capture measurement data using the add-on sensor of the mobile device. In embodiments, the data capture device 15002 may be a stand-alone device that captures measurement data, as described, and communicates the captured measurement data to the client 15004, the server 15010, or a combination thereof, as described.

In embodiments, one or more data capture devices 15002 may be positioned at or near a respective device 13006 at predefined distances and locations with respect to the respective device 13006. The predefined distances and locations at which the one or more data capture devices 15002 are positioned, or disposed, may be selected such that the one or more data capture devices 15002 has a desired field of data capture of a point of interest of the respective device 13006. As described, the point of interested may include any suitable point or areas of the respective device 13006. For example, the point of interested may include a vat, tank, pipe, enclosure, manufactured part, coolant fluid, waste product, other suitable points of interest, or a combination thereof. The field of data capture may include an area in which the desired measurement can be captured using the data capture devices 15002. The data captured from the combine fields of data capture from each respective data capture device 15002 positioned at or near the respective device 13006 may be used, as described, by the image data set generator 15006 to generate one or more image data sets that represent images of the point of interest of the respective device 13006. In embodiments, the data capture devices 15002 may include any combination of the devices described herein or other suitable data capture devices not described.

In embodiments, the data capture devices 15002 may capture measurement data of the respective devices 13006, as described, and communicate the captured measurement data to the client 15004 and/or the server 15010 using the network 15008. The client 15004 may include any suitable client including those described throughout this disclosure. In embodiments, the client 15004 may be a mobile device, or other suitable client. The client 15004 may be owned, operated, and/or utilized by an operator working on or near the respective devices 13006, as described throughout this disclosure. The network 15008 may be any suitable network, including any network described throughout this disclosure, including, but not limited to, the Internet, a cloud network, a local area network, a wide area network, a wireless network, a wired network, a cellular network, and the like, or any combination thereof. The server 15010 may be any suitable server, including any server described throughout this disclosure. The server 15010 may be a stand-alone server or a group of servers. The server 15010 may be a dedicated server or one of a distributed computing servers or a cloud server, and the like, or any combination thereof.

In embodiments, as described, the image data set generator 15006 may comprise an application or other suitable software or program capable of being executed on the client 15004 and/or the server 15010. In embodiments, the client 15004 may be configured to execute the image data set generator 15006. For example, an operator, as described, may carry the client 15004 as the operator interacts with a first devices 13006. One or more of the data capture devices 15002 may be configured to capture measurement data, as described, associated with the first device 13006. For example, a first data capture device 15002 may be disposed near the first device 13006, such that, the first data capture device 15002 has a field of data capture, as described, to a point of interest on the first device 13006. The first data capture device 15002 may capture raw measurement data associated with the first device 13006. The first data capture device 15002 may communicate, via the network 15008, the raw measurement data to the client 15004. The image data set generator 15006 may generate one or more image data sets using the raw measurement data. In some embodiments, the server 15010 may be configured to execute the image data set generator 15006, as is generally illustrated in Figure 152. The first data capture device 15002 may communicate, via the network 15008, the raw measurement data to the server 15010. The image data set generator 15006, being executed by the server 15010, may generate one or more image data sets using the raw measurement data.

In embodiments, the image data set generator 15006 may be configured to generate one or more image data sets using raw measurement data received from the one or more data capture devices 15002. The image data sets may include images that include data capable (e.g., in a suitable format) of being analyzed or processed by the vision analytics module 15012, as described. The image data set generator 15006 may be configured to decode raw measurement data. For example, as described, the one or more data capture devices 15002 may encode raw measurement data before communicating the encoded raw measurement data to the client 15004 and/or the server 15010. The image data set generator 15006 may be configured to decode the raw measurement data using any suitable measurement decoding techniques. For example, the image data set generator 15006 may be configured to interpret a signal representing a measured value as the measurement value. In some embodiments, the image data set generator 15006 may be configured to correlate related raw measurement data, stitch raw measurement data (e.g., by using multiple measurements from one or more data capture devices 15002 to create a single value that represents a point of interest on one of the respective devices 13006), or generate image data sets using any suitable image data set generation techniques, and/or any suitable measurement data processing techniques. For example, the image data set generator 15006 may be configured to use measurement data corresponding to pressure, temperature, chemical structure, or other suitable measurement data, to generate image data that represents the point of interest of the respective device 13006.

In embodiments, the image data set generator 15006 may be configured to use measurement data, as described, in combination with raw image data (e.g., captured by the data capture devices 15002, as described above), to generate one more image data sets. For example, the image data set generator 15006 may be configured to generate an image of the point of interest of the respective device 13006 using captured image data combined with an associated temperature measurement to generate a precise image of the point of interest (e.g., accounting for, for example, component expansion, deflection, growth, shrinkage, or other change in shape or size due to the temperature of the component). The image data set generator 15006 may communicate the one or more image data sets to a vision analytics module 15012. In embodiments, the vision analytics module 15012 may be an application or other suitable software capable of being executed on the server 15010. While the vision analytics module 15012 is illustrated and described as being executed by the server 15010, it should be understood that the client 15004 may be configured to execute the vision analytics module 15012. In embodiments, the vision analytics module 15012 may analyze the image data sets, as described. For example, the visual analyzer 15018 may analyze the image data sets. The operating characteristics detector 15020 may identify operating characteristics, as described.

In embodiments, as described, the training data database 15016 may include any suitable database and may be disposed locally on the client 15004 and/or the server 15010, remotely from either of the client 15004 and the server 15010, or other suitable location. The training data database 15016 may store the training data sets generated by a deep learning system, as will be described. In embodiments, the training data database 15016 may be any suitable training data repository configured to store the training data sets. The training data sets may include any suitable training data sets. For example, the training data sets may be generated by a deep learning system, as will be described, using various suitable data sets, such as data sets representing portions of the respective devices 13006, portions of other devices, data sets representing pressure, data sets representing temperature, data sets representing chemical structure, data sets representing vibration, or other various characteristics of the respective devices 13006 or other devices, or any other suitable data sets.

In embodiments, the training data sets may be used to train the computer vision system 15000 to detect the various operating characteristics of the respective devices 13006. For example, as will be described, the deep learning system may train the visual analyzer 15018 to identify various data points of the image data sets, such as, anomalies, features, characteristics, or other suitable data points. In embodiments, the visual analyzer 15018 may be trained by any suitable training system, such as a machine learning system, an artificial intelligence training system, deep learning system, programed by a human programmer, or configured, trained, programed, etc. using any suitable techniques, methods, and/or systems. For example, the visual analyzer 15018 may be configured to identify a portion of a point of interest of the respective device 13006 represented in an image data set. For example, the visual analyzer 15018 may identify a portion of a belt of the respective device 13006 represented by the image data set. The visual analyzer 15018 may be configured to analyze the portion of the point of interest and determine whether the characteristics (e.g., position, size, shape, and/or other suitable characteristics) of the portion of the point of interest corresponds to predicted or predetermined characteristics of the portion of the point of interest. For example, the visual analyzer 15018 may identify the portion of the point of interest in one of a plurality of images associated with the image data set. The visual analyzer 15018 may record various characteristics of the portion of the point of interest associated with each of the plurality of images of the image data set. For example, the visual analyzer 15018 may record a pressure value, a temperature value, or other suitable measured value associated with a portion of a belt of the respective device 13006 in each image of the plurality of successive images of the image data set and may track the delta in the measured values of the belt in the successive images (e.g., using the measured values captured by the data capture devices 15002, as described). As described, the visual analyzer 15018 may generate variance data sets based on the deltas between the recorded values and the predicted or predetermined values.

In embodiments, the operating characteristics detector 15020 may be located or disposed on the vision analytics module 15012 or located or disposed remotely from the vision analytics module 15012. In embodiments, the operating characteristics detector 15020 may be configured to determine or identify various operating characteristics of the respective device 13006, or any suitable respective device 13006, based on the variance data set. The various operating characteristics may include vibration, heat, distortion, deflection, other suitable operating characteristics, or a combination thereof of the portion of the point of interest during operating of the respective device 13006, vibration, heat, distortion, deflection, other suitable operating characteristics, or a combination thereof of other portions of the respective device 13006, other suitable operating characteristics of the respective device 13006, or a combination thereof.

As described, the operating characteristics detector 15020 may be trained by any suitable training system, such as a machine learning system, an artificial intelligence training system, deep learning system, programed by a human programmer, or configured, trained, programed, etc. using any suitable techniques, methods, and/or systems. In embodiments, the operating characteristics detector 15020 may be trained by a deep learning system, as will be described, using the training data sets that include data sets representing portions of the respective devices 13006, portions of other devices, data sets representing pressure, data sets representing temperature, data sets representing chemical structure, data sets representing vibration, or other various characteristics of the respective devices 13006 or other devices, or any other suitable data sets. In embodiments, the operating characteristics detector 15020 may be configured to identify operating characteristics of the portion of the point of interest by identifying various data of the variance data set that indicate quantities or other suitable measurements of one or more operating characteristics of the respective device 13006. In embodiments, the operating characteristics may include a pressure within a component of the respective device 13006, a temperature of at least a portion of a component of the respective device 13006, a chemical structure of a material (e.g., gas, liquid, or solid of or within a component of the respective device 13006 or of a component or part manufactured by the respective device 13006), a density of a material (e.g., gas, liquid, or solid of or within a component of the respective device 13006 or of a component or part manufactured by the respective device 13006), other suitable operating characteristics, or a combination thereof.

For example, the operating characteristics detector 15020 may identify data of the variance data set that indicates that a component of the respective device 13006 is misshapen due to an unexpected increase in temperature (e.g., by identifying values associated with the variance data set that indicate that the temperature of the component over a period of time is increasing at a rate greater than expected). The operating characteristics detector 15020 may compare the identified operating characteristics with trained or programmed operating characteristics to determine whether the operating characteristics are within operating tolerance for the respective device 13006. For example, the operating characteristics detector 15020 may compare the rate of temperature change of the component with a trained or programmed rate of temperature change of the component. The operating characteristics detector 15020 may output (e.g., to a database, to a report, to monitor, or other suitable output location or device) an operatic characteristics data set that includes data indicating values or the operating characteristics and/or information indicating predictive (e.g., future) operating characteristics (e.g., determined based on the actual or observed operating characteristics of the portion of the point of interest and the trained or programed operating characteristic that indicate that the actual or observed operating characteristics indicate particular further operating characteristics), actual or observed operating characteristics, other suitable information or values, or a combination thereof. As described, an operator may analyze the output data and take appropriate corrective action. Additionally, or alternatively, the computer vision system 15000 may automatically identify a corrective action and initiate the corrective action.

In embodiments, the computer vision system 15000 may implement a classification model (e.g., using a deep neural network, or other suitable neural or other networks). For example, the vision analytics module 15012 may implement a classification module that receives analytics of the image data, including the variance data sets described above. The vision analytics module 15012 may output a classification relating to an operating characteristic of the respective device 13006. For example, the classification model, via the vision analytics module 15012, may receive features defining the variances between the recorded characteristics of the image data sets of the belt of the respective device 13006, in operation. The classification model, having been trained using image data and/or non-image data corresponding to faulty belts, image data and/or non-image data corresponding to belts not yet faulty, and image and/or non-image data corresponding to belts operating in an expected and/or acceptable condition, may output a classification that indicates whether the belt is faulty, operating within expected and/or acceptable condition but trending towards faulty, or in expected and/or acceptable operating condition.

In embodiments, the operating characteristics detector 15020, the vision analytics module 15012, and/or the computer vision system 15000 may generate one or more warnings, signals, indicators, or other suitable outputs configured to alert the operator of one or more of the operating characteristics of the respective device 13006, of one or more components of the respective device 13006 that requires maintenance or replacement, any other suitable alert, or a combination thereof. For example, the computer vision system 15000 may be configured to generate a message, such as a text message, email message, popup message, or other suitable message, indicating that a component (e.g., the first pulley) of the respective device 13006 requires maintenance. The message may include text, characters, images, or other suitable information that conveys the intend message. The computer vision system 15000 may be configured to communicate, via the network 15008, near field communication, or other suitable communication system or protocol, the message to the operator. For example, the computer vision system 15000 may communicate the message to a mobile device, as described, or other suitable device and/or location.

In embodiments, the computer vision system 15000 may be configured to display on an output display a current status of one or more respective devices 13006. For example, a factory, plant, or other suitable location of the respective devices 13006 may include an output display (e.g., a screen or monitor) located such that operators within proximity of the respective devices 13006 can see the output display. The computer vision system 15000 may be configured to display a status (e.g., a red, yellow, green status, an up or down status, or other suitable status or indicator, or a combination thereof) of one or more of the respective devices 13006. For example, the computer vision system 15000 may display a green status next to the respective device 13006 that is operating within tolerable operating conditions (e.g., based on the visual analysis of the image data sets described above). In another example, the computer vision system 15000 may display a yellow status next to the respective device 13006 that is operating within tolerable operating conditions and the visual analysis indicates that the respective device 13006 may start to operated outside of the tolerable operating conditions if the operating characteristics (e.g., identified, as described) continue along a current operating trend (e.g., based on the frequency of vibration of the belt, the computer vision system 15000 determines that continued vibration at that frequency and/or increased frequency may cause the respective device 13006 to operate outside of the tolerable operating conditions). In another example, the computer vision system 15000 may display a red status next to the respective device 13006 that is currently operating outside of tolerable operating conditions. In embodiments, the computer vision system 15000 may display the operating status of the respective devices 13006 on other suitable displays, such as a display of a mobile device, as described. For example, the mobile device may include an application that displays the operating status of the respective devices 13006.

In embodiments, the output of the vision analytics module 15012 may be used to updated and/or improve the training data sets, described above. For example, output from the vision analytics module 15012 may be used to update the training data sets to include additional operating characteristics, improve the precision of the values used to predict various operating characteristics, used for other suitable updates or improvements to the training data sets, or a combination thereof. The training data sets may be used as a continuous feedback to the computer vision system 15000 to improve predictive and determinative capabilities of the computer vision system 15000.

In embodiments, the output of the vision analytics module 15012 may be used to populate and/or update a knowledgebase that may be used by an operator or by the computer vision system 15000 to identify faults, schedule repairs or maintenance, adjust settings on the respective devices 13006, take other corrective action, or other suitable action. For example, the output of the vision analytics module 15012 may be correlated with a corresponding repair of a component (e.g., the output of the vision analytics module 15012 may indicate that vibration of the belt is beyond the expected or acceptable tolerance and an operator may have replaced a pulley in response to the output). The knowledgebase may be updated to indicate that the output of the vision analytics module 15012 (e.g., including the values of the operating characteristics determined above) resulted in a replaced pulley. In this manner, the knowledgebase may continue to grow and provide accurate and precise information for an operator or the computer vision system 15000 as it relates to operating characteristics and corresponding corrective actions, thereby improving the efficiency of the computer vision system 15000 and assisting the operator in identifying issues and corresponding corrective actions.

In embodiments, the computer vision system 15000 may be configured to visually inspect components, parts, systems, devices, or a combination thereof, other than those described above. For example, the computer vision system 15000 may be configured to visually inspect, as described, parts manufactured in a parts manufacturing facility. For example, the data capture devices 15002 may be disposed or positioned such that field of data capture for each respective data capture device 15002 is directed toward at least a portion of a part being manufactured (e.g., on a parts manufacturing line). The data capture devices 15002 may capture data associated with the parts as the parts move along the parts manufacturing line. The computer vision system 15000 may analyze the data captured by the data capture devices 15002 (e.g., as image data sets generated by the image data set generator 15006) and identify anomalies, variations, or other conditions that deviate from tolerable standards for the part. In embodiments, the part may include a part for a vehicle, a part for a bike, a bike chain, a gasket, a fastener (e.g., a screw, a bolt, a nut, a nail, and the like), a printed circuit board, a capacitor, an inductor, a resistor, or other suitable part. For example, the computer vision system 15000 may analyze image data sets associated with bike chains being manufactured. The computer vision system 15000 may identify a bend in a portion of a bike chain that is outside of the tolerable standards for the portion of the bike chain based on the analysis described above. The computer vision system 15000 may generate a message, as described, indicating that the bike chain should be taken out of circulation, repaired, destroyed, or other suitable action.

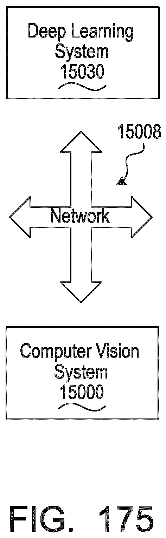

As is generally illustrated in FIGS. 175-176, a deep learning system 15030 may be configured to train the computer vision system 15000, using the training data sets, to identify operating characteristics of the respective devices 13006 or other suitable devices, identify corrective actions in response to the identified operating characteristics, and initiate corrective action based on the identified corrective actions. The deep learning system 15030 may train the computer vision system 15000 using learning based on data representations. In embodiments, the deep learning system 15030 may train the computer vision system 15000 using supervised training (e.g., using classification), semi-supervised training, or unsupervised training (e.g., using pattern analysis). In embodiments, the deep learning system 15030 may include a deep neural network, a deep belief network, a recurrent neural network, other suitable networks or learning systems, or a combination thereof.

In embodiments, the deep learning system 15030 may include propositional formulas or latent variables organized into a plurality of layers. Each of the plurality of layers may be configured to represent an abstract portion of an image. For example, a first layer may represent an abstract of pixels and encode edges of an input image, for example, an image representing a point of interest of the representative device 13006. A second layer may represent arrangements of the edges. A third layer may encode a first portion of a component within the point of interest of the representative device 13006 (e.g., a portion of the belt, as described). A fourth later may represent another encoded portion of the component, and so on, such that, the plurality of layers, when overlaid, represents the point of interest of the representative device 13006. The deep learning system 15030 may be configured to translate the layers into training data sets, used to train the computer vision system 15000. For example, the deep learning system 15030 may translate a plurality of layers of one or more images that represents a belt of the representative device 13006 vibrating at a first frequency. The deep learning system 15030 may use input data from various sources to determine whether the first frequency represents a frequency at which the belt is vibration within the expected or acceptable tolerances, as described. For example, the deep learning system 15030 may receive data indicating repair data, maintenance data, uptime data, downtime data, profitability data, efficiencies data, operational optimization data, other suitable data, or a combination thereof, associated with the respective device 13006, a process, a production line, a facility, or other suitable systems.

In embodiments, the deep learning system 15030 may identify data values corresponding to the first frequency of the belt. For example, the deep learning system 15030 may identify an uptime value, a downtime value, a profitability value, other suitable values, or a combination thereof that correspond to periods when the respective device 13006 operated with the belt vibrating at the first frequency. For example, the deep learning system 15030 may determine that the first frequency is within the expected or acceptable tolerances when the data indicates that the respective device 13006 had an uptime that was above a threshold, a downtime that was below a threshold, a profitability that was above a threshold, or a combination thereof. Conversely, the deep learning system 15030 may determine that the first frequency is beyond the expected or acceptable tolerances when, for example, the downtime associated with the respective device 13006 was above a threshold. It should be understood that the deep learning system 15030 may identify any suitable operating characteristic besides those disclosed herein and that the deep learning system 15030 may determine positive or negative outcomes of the operating characteristics based on any suitable data analysis other than those described herein.

In embodiments, the deep learning system 15030 may generate the training data sets using the identified operating characteristics and associated analysis thereof. In embodiments, the deep learning system 15030 may train the computer vision system 15000 using the training data sets. In embodiments, the deep learning system 15030 may receive feedback information from the computer vision system 15000, an operator, a programmer, other suitable sources, or a combination thereof. The deep learning system 15030 may update the training data sets based on the feedback. For example, the computer vision system 15000, having been trained using the training data sets, may identify a component as faulty. The operator may visually inspect the component and determine that the component is not faulty. The operator and/or the computer vision system 15000 may communicate to the deep learning system 15030 that the component was not faulty based on the identified operating characteristics (e.g., identified by the computer vision system 15000). The deep learning system 15030 may update the training data sets using the feedback from the operator and/or the computer vision system 15000.

In embodiments, an apparatus for detecting operating characteristics of a manufacturing device includes a memory and a processor. The memory includes instructions executable by the processor to generate one or more image data sets using raw data captured by one or more data capture devices; identify one or more values corresponding to a portion of the manufacturing device within a point of interest represented by the one or more image data sets; record the one or more values; compare the recorded one or more values to corresponding predicted values; generate a variance data set based on the comparison of the recorded on or more values and the corresponding predicted values; identify an operating characteristic of the manufacturing device based on the variance data; and generate an indication indicating the operating characteristic.

In embodiments, the memory includes instructions further executable by the processor to identify a corrective action responsive to identifying the operating characteristic. In embodiments, the memory includes instructions further executable by the processor to initiate a corrective action responsive to identifying the operating characteristics. In embodiments, the operating characteristic includes a vibration of a component of the manufacturing device. In embodiments, the operating characteristic includes a shape of a component of the manufacturing device. In embodiments, the operating characteristic includes a size of a component of the manufacturing device. In embodiments, the operating characteristic includes a deflection of a component of the manufacturing device. In embodiments, the operating characteristic includes an electromagnetic emission of a component of the manufacturing device. In embodiments, the operating characteristic includes a temperature of a component of the manufacturing device. In embodiments, the operating characteristic includes a temperature of a gas within a component of the manufacturing device. In embodiments, the operating characteristic includes a temperature of a liquid within a component of the manufacturing device. In embodiments, the operating characteristic includes a temperature of a solid within a component of the manufacturing device. In embodiments, the operating characteristic includes a pressure within a component of the manufacturing device. In embodiments, the operating characteristic includes a pressure of a gas within a component of the manufacturing device. In embodiments, the operating characteristic includes a pressure of a liquid within a component of the manufacturing device. In embodiments, the operating characteristic includes a density of a gas within a component of the manufacturing device.

In embodiments, the operating characteristic includes a density of a liquid within a component of the manufacturing device. In embodiments, the operating characteristic includes a density of a solid within a component of the manufacturing device. In embodiments, the operating characteristic includes a density of a component manufactured by the manufacturing device. In embodiments, the component includes a part for a vehicle. In embodiments, the component includes a part for a bike. In embodiments, the component includes a bike chain. In embodiments, the component includes a gasket. In embodiments, the component includes a fastener. In embodiments, the component includes a part for a screw. In embodiments, the component includes a part for a bolt. In embodiments, the component includes a part for a printed circuit board. In embodiments, the component includes a part for a capacitor. In embodiments, the component includes a part for a resistor. In embodiments, the component includes a part for an inductor. In embodiments, the operating characteristic includes a chemical structure of a gas within a component of the manufacturing device.

In embodiments, the operating characteristic includes a chemical structure of a liquid within a component of the manufacturing device. In embodiments, the operating characteristic includes a chemical structure of a solid within a component of the manufacturing device. In embodiments, the operating characteristic includes a chemical structure of a component manufactured by the manufacturing device. In embodiments, the component includes a part for a vehicle. In embodiments, the component includes a part for a bike. In embodiments, the component includes a bike chain. In embodiments, the component includes a gasket. In embodiments, the component includes a fastener. In embodiments, the component includes a part for a screw. In embodiments, the component includes a part for a bolt. In embodiments, the component includes a part for a printed circuit board. In embodiments, the component includes a part for a capacitor.

In embodiments, the component includes a part for a resistor. In embodiments, the component includes a part for an inductor. In embodiments, the data capture device includes an image capture device. In embodiments, the data capture device includes a camera. In embodiments, the data capture device includes data measurement device. In embodiments, the data capture device includes a sensor. In embodiments, the data capture device includes a full spectrum camera. In embodiments, the data capture device includes radiation imaging device. In embodiments, the data capture device includes an X-ray imaging device. In embodiments, the data capture device includes a non-visible light data capture device. In embodiments, the data capture device includes a visible light data capture device. In embodiments, the data capture device includes sonic data capture device. In embodiments, the data capture device includes an image capture device. In embodiments, the data capture device includes light imaging, detection, and ranging device. In embodiments, the data capture device includes point cloud data capture device. In embodiments, the data capture device includes an infrared inspection device. In embodiments, the data capture device includes an image capture device.

In embodiments, the data capture device includes a pressure sensor. In embodiments, the data capture device includes a temperature sensor. In embodiments, the data capture device includes a chemical sensor. In embodiments, the data capture device includes a stand-alone device. In embodiments, the data capture device includes associated with a mobile device. In embodiments, the mobile device includes a smart phone. In embodiments, the mobile device includes a tablet. In embodiments, the raw data includes raw image data. In embodiments, the raw data includes raw measurement data. In embodiments, the portion of the manufacturing device within the point of interest includes a component of the manufacturing device. In embodiments, the portion of the manufacturing device within the point of interest includes a belt of the manufacturing device. In embodiments, the portion of the manufacturing device within the point of interest includes a component manufactured by the manufacturing device. In embodiments, the portion of the manufacturing device within the point of interest includes a bike chain manufactured by the manufacturing device.

In embodiments, a method for detecting operating characteristics of a manufacturing device includes generating one or more image data sets using raw data captured by one or more data capture devices; identifying one or more values corresponding to a portion of the manufacturing device within a point of interest represented by the one or more image data sets; recording the one or more values; comparing the recorded one or more values to corresponding predicted values; generating a variance data set based on the comparison of the recorded on or more values and the corresponding predicted values; identifying an operating characteristic of the manufacturing device based on the variance data;

and generating an indication indicating the operating characteristic.

In embodiments, the method also includes identifying a corrective action responsive to identifying the operating characteristic. In embodiments, the method also includes initiating a corrective action responsive to identifying the operating characteristics. In embodiments, the operating characteristic includes a vibration of a component of the manufacturing device. In embodiments, the operating characteristic includes a shape of a component of the manufacturing device. In embodiments, the operating characteristic includes a size of a component of the manufacturing device. In embodiments, the operating characteristic includes a deflection of a component of the manufacturing device. In embodiments, the operating characteristic includes an electromagnetic emission of a component of the manufacturing device. In embodiments, the operating characteristic includes a temperature of a component of the manufacturing device. In embodiments, the operating characteristic includes a temperature of a gas within a component of the manufacturing device. In embodiments, the operating characteristic includes a temperature of a liquid within a component of the manufacturing device. In embodiments, the operating characteristic includes a temperature of a solid within a component of the manufacturing device. In embodiments, the operating characteristic includes a pressure within a component of the manufacturing device. In embodiments, the operating characteristic includes a pressure of a gas within a component of the manufacturing device. In embodiments, the operating characteristic includes a pressure of a liquid within a component of the manufacturing device. In embodiments, the operating characteristic includes a density of a gas within a component of the manufacturing device.

In embodiments, the operating characteristic includes a density of a liquid within a component of the manufacturing device. In embodiments, the operating characteristic includes a density of a solid within a component of the manufacturing device. In embodiments, the operating characteristic includes a density of a component manufactured by the manufacturing device. In embodiments, the component includes a part for a vehicle. In embodiments, the component includes a part for a bike. In embodiments, the component includes a bike chain. In embodiments, the component includes a gasket. In embodiments, the component includes a fastener. In embodiments, the component includes a part for a screw. In embodiments, the component includes a part for a bolt. In embodiments, the component includes a part for a printed circuit board. In embodiments, the component includes a part for a capacitor. In embodiments, the component includes a part for a resistor. In embodiments, the component includes a part for an inductor. In embodiments, the operating characteristic includes a chemical structure of a gas within a component of the manufacturing device.

In embodiments, the operating characteristic includes a chemical structure of a liquid within a component of the manufacturing device. In embodiments, the operating characteristic includes a chemical structure of a solid within a component of the manufacturing device. In embodiments, the operating characteristic includes a chemical structure of a component manufactured by the manufacturing device. In embodiments, the component includes a part for a vehicle. In embodiments, the component includes a part for a bike. In embodiments, the component includes a bike chain. In embodiments, the component includes a gasket. In embodiments, the component includes a fastener. In embodiments, the component includes a part for a screw. In embodiments, the component includes a part for a bolt. In embodiments, the component includes a part for a printed circuit board. In embodiments, the component includes a part for a capacitor.

In embodiments, the component includes a part for a resistor. In embodiments, the component includes a part for an inductor. In embodiments, the data capture device includes an image capture device. In embodiments, the data capture device includes a camera. In embodiments, the data capture device includes data measurement device. In embodiments, the data capture device includes a sensor. In embodiments, the data capture device includes a full spectrum camera. In embodiments, the data capture device includes radiation imaging device. In embodiments, the data capture device includes an X-ray imaging device. In embodiments, the data capture device includes a non-visible light data capture device. In embodiments, the data capture device includes a visible light data capture device. In embodiments, the data capture device includes sonic data capture device. In embodiments, the data capture device includes an image capture device. In embodiments, the data capture device includes light imaging, detection, and ranging device. In embodiments, the data capture device includes point cloud data capture device. In embodiments, the data capture device includes an infrared inspection device. In embodiments, the data capture device includes an image capture device.

In embodiments, the data capture device includes a pressure sensor. In embodiments, the data capture device includes a temperature sensor. In embodiments, the data capture device includes a chemical sensor. In embodiments, the data capture device includes a stand-alone device. In embodiments, the data capture device includes associated with a mobile device. In embodiments, the mobile device includes a smart phone. In embodiments, the mobile device includes a tablet. In embodiments, the raw data includes raw image data. In embodiments, the raw data includes raw measurement data. In embodiments, the portion of the manufacturing device within the point of interest includes a component of the manufacturing device. In embodiments, the portion of the manufacturing device within the point of interest includes a belt of the manufacturing device. In embodiments, the portion of the manufacturing device within the point of interest includes a component manufactured by the manufacturing device. In embodiments, the portion of the manufacturing device within the point of interest includes a bike chain manufactured by the manufacturing device.

In embodiments, a system for detecting operating characteristics of a manufacturing device includes at least one data capture device configured to capture raw data of a point of interest of the manufacturing device, a memory, and a processor. The memory includes instructions executable by the processor to: generate one or more image data sets using the raw data captured; identify one or more values corresponding to a portion of the manufacturing device within the point of interest represented by the one or more image data sets; record the one or more values; compare the recorded one or more values to corresponding predicted values; generate a variance data set based on the comparison of the recorded on or more values and the corresponding predicted values; identify an operating characteristic of the manufacturing device based on the variance data; and generate an indication indicating the operating characteristic.

In embodiments, the memory includes instructions further executable by the processor to identify a corrective action responsive to identifying the operating characteristic. In embodiments, the memory includes instructions further executable by the processor to initiate a corrective action responsive to identifying the operating characteristics. In embodiments, the operating characteristic includes a vibration of a component of the manufacturing device. In embodiments, the operating characteristic includes a shape of a component of the manufacturing device. In embodiments, the operating characteristic includes a size of a component of the manufacturing device. In embodiments, the operating characteristic includes a deflection of a component of the manufacturing device. In embodiments, the operating characteristic includes an electromagnetic emission of a component of the manufacturing device. In embodiments, the operating characteristic includes a temperature of a component of the manufacturing device. In embodiments, the operating characteristic includes a temperature of a gas within a component of the manufacturing device. In embodiments, the operating characteristic includes a temperature of a liquid within a component of the manufacturing device. In embodiments, the operating characteristic includes a temperature of a solid within a component of the manufacturing device. In embodiments, the operating characteristic includes a pressure within a component of the manufacturing device. In embodiments, the operating characteristic includes a pressure of a gas within a component of the manufacturing device. In embodiments, the operating characteristic includes a pressure of a liquid within a component of the manufacturing device. In embodiments, the operating characteristic includes a density of a gas within a component of the manufacturing device.

In embodiments, the operating characteristic includes a density of a liquid within a component of the manufacturing device. In embodiments, the operating characteristic includes a density of a solid within a component of the manufacturing device. In embodiments, the operating characteristic includes a density of a component manufactured by the manufacturing device. In embodiments, the component includes a part for a vehicle. In embodiments, the component includes a part for a bike. In embodiments, the component includes a bike chain. In embodiments, the component includes a gasket. In embodiments, the component includes a fastener. In embodiments, the component includes a part for a screw. In embodiments, the component includes a part for a bolt. In embodiments, the component includes a part for a printed circuit board. In embodiments, the component includes a part for a capacitor. In embodiments, the component includes a part for a resistor. In embodiments, the component includes a part for an inductor. In embodiments, the operating characteristic includes a chemical structure of a gas within a component of the manufacturing device.

In embodiments, the operating characteristic includes a chemical structure of a liquid within a component of the manufacturing device. In embodiments, the operating characteristic includes a chemical structure of a solid within a component of the manufacturing device. In embodiments, the operating characteristic includes a chemical structure of a component manufactured by the manufacturing device. In embodiments, the component includes a part for a vehicle. In embodiments, the component includes a part for a bike. In embodiments, the component includes a bike chain. In embodiments, the component includes a gasket. In embodiments, the component includes a fastener. In embodiments, the component includes a part for a screw. In embodiments, the component includes a part for a bolt. In embodiments, the component includes a part for a printed circuit board. In embodiments, the component includes a part for a capacitor.

In embodiments, the component includes a part for a resistor. In embodiments, the component includes a part for an inductor. In embodiments, the data capture device includes an image capture device. In embodiments, the data capture device includes a camera. In embodiments, the data capture device includes data measurement device. In embodiments, the data capture device includes a sensor. In embodiments, the data capture device includes a full spectrum camera. In embodiments, the data capture device includes radiation imaging device. In embodiments, the data capture device includes an X-ray imaging device. In embodiments, the data capture device includes a non-visible light data capture device. In embodiments, the data capture device includes a visible light data capture device. In embodiments, the data capture device includes sonic data capture device. In embodiments, the data capture device includes an image capture device. In embodiments, the data capture device includes light imaging, detection, and ranging device. In embodiments, the data capture device includes point cloud data capture device. In embodiments, the data capture device includes an infrared inspection device. In embodiments, the data capture device includes an image capture device.

In embodiments, the data capture device includes a pressure sensor. In embodiments, the data capture device includes a temperature sensor. In embodiments, the data capture device includes a chemical sensor. In embodiments, the data capture device includes a stand-alone device. In embodiments, the data capture device includes associated with a mobile device. In embodiments, the mobile device includes a smart phone. In embodiments, the mobile device includes a tablet. In embodiments, the raw data includes raw image data. In embodiments, the raw data includes raw measurement data. In embodiments, the portion of the manufacturing device within the point of interest includes a component of the manufacturing device. In embodiments, the portion of the manufacturing device within the point of interest includes a belt of the manufacturing device. In embodiments, the portion of the manufacturing device within the point of interest includes a component manufactured by the manufacturing device. In embodiments, the portion of the manufacturing device within the point of interest includes a bike chain manufactured by the manufacturing device.

In embodiments, a computer vision system for detecting operating characteristics of a manufacturing device, includes at least one data capture device configured to capture raw data of a point of interest of the manufacturing device, a memory, and a processor. The memory includes instructions executable by the processor to: generate one or more image data sets using the raw data captured; visually identify one or more values corresponding to a portion of the manufacturing device within the point of interest represented by the one or more image data sets; record the one or more values; visually compare the recorded one or more values to corresponding predicted values; generate a variance data set based on the comparison of the recorded on or more values and the corresponding predicted values; identify an operating characteristic of the manufacturing device based on the variance data; compare the operating characteristic to a threshold; determine whether the operating characteristic is within a tolerance based on whether the operating characteristic is greater than the threshold; and generate an indication indicating the operating characteristic.

In embodiments, the computer vision system is trained by a deep learning system. In embodiments, the deep learning system is configured to train the computer vision system using at least one training data set. In embodiments, the at least one training data set includes image data. In embodiments, the at least one training data set includes non-image data.

In embodiments, a computer vision system for detecting operating characteristics of a device, includes at least one data capture device configured to capture raw data of a point of interest of the device, a memory and a processor. The memory includes instructions executable by the processor to: generate one or more image data sets using the raw data captured; visually identify one or more values corresponding to a portion of the device within the point of interest represented by the one or more image data sets; record the one or more values; visually compare the recorded one or more values to corresponding predicted values; generate a variance data set based on the comparison of the recorded one or more values and the corresponding predicted values; identify an operating characteristic of the device based on the variance data; compare the operating characteristic to a threshold; determine whether the operating characteristic is within a tolerance based on whether the operating characteristic is greater than the threshold; and generate an indication indicating the operating characteristic.

In embodiments, the device includes an agitator. In embodiments, the device includes an airframe control surface vibration device. In embodiments, the device includes a catalytic reactor. In embodiments, the device includes a compressor. In embodiments, the device includes a conveyor. In embodiments, the device includes a lifter. In embodiments, the device includes a pipeline. In embodiments, the device includes an electric powertrain. In embodiments, the device includes a robotic assembly device. In embodiments, the device includes a device in a gas production environment. In embodiments, the device includes a device in a pharmaceutical environment.

In embodiments, a system for data collection, using a computer vision system, in an industrial environment having the use of an analog cross point switch for collecting variable groups of analog sensor inputs with remote monitoring is disclosed.

In embodiments, a system for data collection, using a computer vision system, in an industrial environment having up front signal conditioning on a multiplexer for improved signal-to-noise ratio with remote monitoring is disclosed.

In embodiments, a system for data collection, using a computer vision system, in an industrial environment having multiplexer continuous monitoring alarming features with remote monitoring is disclosed.

In embodiments, a system for data collection, using a computer vision system, in an industrial environment having the use of distributed CPLD chips with dedicated bus for logic control of multiple MUX and data acquisition sections with remote monitoring is disclosed.

In embodiments, a system for data collection, using a computer vision system, in an industrial environment having high-amperage input capability using solid state relays and design topology with remote monitoring is disclosed.

In embodiments, a system for data collection, using a computer vision system, in an industrial environment having power-down ability of at least one of an analog sensor channel and a component board with remote monitoring.

In embodiments, a system for data collection, using a computer vision system, in an industrial environment having unique electrostatic protection for trigger and vibration inputs with remote monitoring is disclosed.

In embodiments, a system for data collection, using a computer vision system, in an industrial environment having precise voltage reference for A/D zero reference with remote monitoring is disclosed.

In embodiments, a system for data collection, using a computer vision system, in an industrial environment having a phase-lock loop band-pass tracking filter for obtaining slow-speed RPMs and phase information with remote monitoring is disclosed.

In embodiments, a system for data collection, using a computer vision system, in an industrial environment having digital derivation of phase relative to input and trigger channels using on-board timers with remote monitoring is disclosed.

In embodiments, a system for data collection, using a computer vision system, in an industrial environment having a peak-detector for auto-scaling that is routed into a separate analog-to-digital converter for peak detection with remote monitoring is disclosed.

In embodiments, a system for data collection, using a computer vision system, in an industrial environment having routing of a trigger channel that is either raw or buffered into other analog channels with remote monitoring is disclosed.

In embodiments, a system for data collection, using a computer vision system, in an industrial environment having the use of higher input oversampling for delta-sigma A/D for lower sampling rate outputs to minimize AA filter requirements with remote monitoring is disclosed.

In embodiments, a system for data collection, using a computer vision system, in an industrial environment having the use of a CPLD as a clock-divider for a delta-sigma analog-to-digital converter to achieve lower sampling rates without the need for digital resampling with remote monitoring is disclosed.

In embodiments, a system for data collection, using a computer vision system, in an industrial environment having long blocks of data at a high-sampling rate as opposed to multiple sets of data taken at different sampling rates with remote monitoring is disclosed.

In embodiments, a system for data collection, using a computer vision system, in an industrial environment having storage of calibration data with maintenance history on-board card set with remote monitoring is disclosed.

In embodiments, a system for data collection, using a computer vision system, in an industrial environment having a rapid route creation capability using hierarchical templates with remote monitoring is disclosed.

In embodiments, a system for data collection, using a computer vision system, in an industrial environment having intelligent management of data collection bands with remote monitoring is disclosed.

In embodiments, a system for data collection, using a computer vision system, in an industrial environment having a neural net expert system using intelligent management of data collection bands with remote monitoring is disclosed.

In embodiments, a system for data collection, using a computer vision system, in an industrial environment having use of a database hierarchy in sensor data analysis with remote monitoring is disclosed.

In embodiments, a system for data collection, using a computer vision system, in an industrial environment having an expert system GUI graphical approach to defining intelligent data collection bands and diagnoses for the expert system with remote monitoring is disclosed.

In embodiments, a system for data collection, using a computer vision system, in an industrial environment having a graphical approach for back-calculation definition with remote monitoring is disclosed.

In embodiments, a system for data collection, using a computer vision system, in an industrial environment having proposed bearing analysis methods with remote monitoring is disclosed.

In embodiments, a system for data collection, using a computer vision system, in an industrial environment having torsional vibration detection/analysis utilizing transitory signal analysis with remote monitoring is disclosed.

In embodiments, a system for data collection, using a computer vision system, in an industrial environment having improved integration using both analog and digital methods with remote monitoring is disclosed.

In embodiments, a system for data collection, using a computer vision system, in an industrial environment having adaptive scheduling techniques for continuous monitoring of analog data in a local environment with remote monitoring is disclosed.

In embodiments, a system for data collection, using a computer vision system, in an industrial environment having data acquisition parking features with remote monitoring is disclosed.

In embodiments, a system for data collection, using a computer vision system, in an industrial environment having a self-sufficient data acquisition box with remote monitoring is disclosed.

In embodiments, a system for data collection, using a computer vision system, in an industrial environment having SD card storage with remote monitoring is disclosed.

In embodiments, a system for data collection, using a computer vision system, in an industrial environment having extended onboard statistical capabilities for continuous monitoring with remote monitoring is disclosed.

In embodiments, a system for data collection, using a computer vision system, in an industrial environment having the use of ambient, local and vibration noise for prediction with remote monitoring is disclosed.

In embodiments, a system for data collection, using a computer vision system, in an industrial environment having smart route changes route based on incoming data or alarms enable simultaneous dynamic data for analysis or correlation with remote monitoring is disclosed.

In embodiments, a system for data collection, using a computer vision system, in an industrial environment having smart ODS and transfer functions with remote monitoring is disclosed.

In embodiments, a system for data collection, using a computer vision system, in an industrial environment having hierarchical multiplexer with remote monitoring is disclosed.

In embodiments, a system for data collection, using a computer vision system, in an industrial environment having identification sensor overload with remote monitoring is disclosed.

In embodiments, a system for data collection, using a computer vision system, in an industrial environment having RF identification and an inclinometer with remote monitoring is disclosed.

In embodiments, a system for data collection, using a computer vision system, in an industrial environment having continuous ultrasonic monitoring with remote monitoring is disclosed.

In embodiments, a system for data collection, using a computer vision system, in an industrial environment having cloud-based, machine pattern recognition based on fusion of remote, analog industrial sensors with remote monitoring is disclosed.

In embodiments, a system for data collection, using a computer vision system, in an industrial environment having cloud-based, machine pattern analysis of state information from multiple analog industrial sensors to provide anticipated state information for an industrial system with remote monitoring is disclosed.

In embodiments, a system for data collection, using a computer vision system, in an industrial environment having cloud-based policy automation engine for IoT, with creation, deployment and management of IoT devices with remote monitoring is disclosed.

In embodiments, a system for data collection, using a computer vision system, in an industrial environment having on-device sensor fusion and data storage for industrial IoT devices with remote monitoring is disclosed.

In embodiments, a system for data collection, using a computer vision system, in an industrial environment having a self-organizing data marketplace for industrial IoT data with remote monitoring is disclosed.

In embodiments, a system for data collection, using a computer vision system, in an industrial environment having self-organization of data pools based on utilization and/or yield metrics with remote monitoring

In embodiments, a system for data collection, using a computer vision system, in an industrial environment having training AI models based on industry-specific feedback with remote monitoring is disclosed.

In embodiments, a system for data collection, using a computer vision system, in an industrial environment having a self-organized swarm of industrial data collectors with remote monitoring is disclosed.

In embodiments, a system for data collection, using a computer vision system in an industrial environment having an IoT distributed ledger with remote monitoring is disclosed.

In embodiments, a system for data collection, using a computer vision system, in an industrial environment having a self-organizing collector with remote monitoring is disclosed.

In embodiments, a system for data collection, using a computer vision system, in an industrial environment having a network-sensitive collector with remote monitoring is disclosed.

In embodiments, a system for data collection, using a computer vision system, in an industrial environment having a remotely organized collector with remote monitoring is disclosed.

In embodiments, a system for data collection, using a computer vision system, in an industrial environment having a self-organizing storage for a multi-sensor data collector with remote monitoring is disclosed.

In embodiments, a system for data collection, using a computer vision system, in an industrial environment having a self-organizing network coding for multi-sensor data network with remote monitoring is disclosed.

In embodiments, a system for data collection, using a computer vision system, in an industrial environment having a wearable haptic user interface for an industrial sensor data collector, with vibration, heat, electrical and/or sound outputs with remote monitoring is disclosed.

In embodiments, a system for data collection, using a computer vision system, in an industrial environment having heat maps displaying collection data for AR/VR with remote monitoring is disclosed.

In embodiments, a system for data collection, using a computer vision system, in an industrial environment having automatically tuned AR/VR visualization of data collected by a data collector with remote monitoring is disclosed.

In embodiments, a system for data collection, using a computer vision system, in an industrial environment having an IoT platform with remote monitoring is disclosed.

In embodiments, a system for data collection, using a computer vision system, in an industrial environment having an IoT data adapter for receiving data inputs and establishing a connection with one or more available IoT cloud platforms to publish the data with remote monitoring is disclosed.

In embodiments, a system for data collection, using a computer vision system, in an industrial environment having a condition detector for detecting conditions related to connect attempts made by the IoT data adapter to one or more IoT cloud platforms with remote monitoring is disclosed.

In embodiments, a system for data collection, using a computer vision system, in an industrial environment having an IoT data adapter with an adaptation engine with remote monitoring is disclosed.

In embodiments, a system for data collection, using a computer vision system, in an industrial environment having the use of machine learning to prepare a data packet or stream with remote monitoring is disclosed.

In embodiments, a system for data collection, using a computer vision system, in an industrial environment having a data marketplace that provides a pool of available cloud networking platforms with remote monitoring is disclosed.

In embodiments, a system for data collection, using a computer vision system, in an industrial environment having a messaging utility that provides a cloud platform user interface with a message indicating the availability of a new data source and data source integration and usage instructions with remote monitoring is disclosed.

In embodiments, a system for data communication, using a computer vision system, between nodes having the ability to maintain a first and second transmission limit based on received rate of arrival and success of delivery feedback messages, and limiting transmission of messages based on the transmission limits with remote monitoring is disclosed.

In embodiments, a system for data communication, using a computer vision system, between nodes having the ability to limit transmission of further messages not yet acknowledged as successfully delivered according to the window size with remote monitoring is disclosed.

In embodiments, a system for data communication, using a computer vision system, between nodes having the ability to maintain an estimate of a rate of loss events and use it to adjust the rate of redundancy messages with remote monitoring is disclosed.

In embodiments, a system for data communication, using a computer vision system, between nodes having an estimated rate of loss events where the error correction code used to determine redundancy messages chosen is based on the estimated rate of loss events with remote monitoring is disclosed.

In embodiments, a system for data communication, using a computer vision system, between nodes having the ability to apply forward error correction based on messages received describing channel characteristics with remote monitoring is disclosed.

In embodiments, a system for data communication, using a computer vision system, between nodes having the ability to maintain/set timers based on occurrences of delivery order events and delaying transmission of feedback messages using timers with remote monitoring is disclosed.

In embodiments, a system for data communication, using a computer vision system, between nodes having the ability to maintain/set timers based on occurrences of delivery order events and delaying modification of congestion window size based on timers with remote monitoring is disclosed.

In embodiments, a system for data communication, using a computer vision system, between nodes having the ability to maintain/set timers based on occurrences of delivery order events, delaying modification of congestion window size based on timers, and cancelling modification of congestion window size when receiving a feedback message indicating successful delivery with remote monitoring is disclosed.

In embodiments, a system for data communication, using a computer vision system between nodes having the ability to configure a new connection using maintained data characterizing a current/previous connection with remote monitoring is disclosed.

In embodiments, a system for data communication, using a computer vision system, between nodes having the ability to configure a new connection using maintained data characterizing an error rate of a current/previous connection with remote monitoring is disclosed.

In embodiments, a system for data communication, using a computer vision system, between nodes having the ability to configure a new connection using maintained data characterizing a timing variability of a current/previous connection with remote monitoring is disclosed.

In embodiments, a system for data communication, using a computer vision system, between nodes having the ability to configure a new connection using maintained data characterizing bandwidth of a current/previous connection with remote monitoring is disclosed.

In embodiments, a system for data communication, using a computer vision system, between nodes having the ability to configure a new connection using maintained data characterizing round trip time of a current/previous connection with remote monitoring is disclosed.

In embodiments, a system for data communication, using a computer vision system, between nodes having the ability to configure a new connection using maintained data characterizing communication control parameters of a current/previous connection with remote monitoring is disclosed.

In embodiments, a system for data communication, using a computer vision system, between nodes having the ability to configure new connection using maintained data characterizing forward error correction parameters of a current/previous connection with remote monitoring is disclosed.

In embodiments, a system for data communication, using a computer vision system, between nodes having a data store for maintaining data characterizing one or more current or previous data communication connections and a connection initiation module for initiating new data communication connections based on maintained data with remote monitoring is disclosed.

In embodiments, a system for data communication, using a computer vision system, between nodes having the ability to transmit a first subset of data messages over a lower latency data path and a second subset of messages over a higher latency data path with remote monitoring is disclosed.

In embodiments, a system for data communication, using a computer vision system, between nodes having the ability to transmit a first subset of data messages that are time critical over a lower latency data path and a second subset of messages over a higher latency data path with remote monitoring is disclosed.

In embodiments, a system for data communication, using a computer vision system, between nodes having the ability to transmit a first initial subset of data messages over a lower latency data path and a second subset of messages that are subsequently available over a higher latency data path with remote monitoring is disclosed.

In embodiments, a system for data communication, using a computer vision system, between nodes having the ability to transmit a first subset of acknowledgment messages over a lower latency data path and a second subset of data messages over a higher latency data path with remote monitoring is disclosed.

In embodiments, a system for data communication, using a computer vision system, between nodes having the ability to transmit a first subset of supplemental/redundancy data messages over a lower latency data path and a second subset of data messages over a higher latency data path with remote monitoring is disclosed.

In embodiments, a system for data communication, using a computer vision system, between nodes having a degree of redundancy associated with each message that is based on message position in the transmission order with remote monitoring is disclosed.

In embodiments, a system for data communication, using a computer vision system, between nodes having a degree of redundancy associated with each message that increases as the position of the messages is non-decreasing with remote monitoring is disclosed.

In embodiments, a system for data communication, using a computer vision system, between nodes having a degree of redundancy associated with each message that is based on message position in the transmission order and in response to receiving feedback messages with remote monitoring is disclosed.

In embodiments, a system for data communication, using a computer vision system, between nodes having a degree of redundancy associated with each message that is based on message position in the transmission order and in response to receiving feedback messages, and adding or removing redundancy messages from the queue based on the feedback messages with remote monitoring is disclosed.

In embodiments, a system for data communication, using a computer vision system, between nodes having the ability to adjust the number of messages sent over each of multiple different data paths with different communication protocols if it is determined that a data path is altering flow of messages with remote monitoring is disclosed.

In embodiments, a system for data communication, using a computer vision system, between nodes having the ability to adjust the number of messages sent over each of multiple different data paths with different communication protocols if it is determined that a data path is altering flow of messages initial division based on previous communication connections with remote monitoring is disclosed.

In embodiments, a system for data communication, using a computer vision system, between nodes having the ability to modify/add/remove redundancy information associated with encoded data as it travels from node to node via channels based on channel characteristics with remote monitoring is disclosed.

In embodiments, a system for data communication, using a computer vision system, between nodes having the ability to send FEC packets at an estimated rate of loss events (isolated packet loss or burst of consecutive packets) with remote monitoring is disclosed.

In embodiments, a system for data communication, using a computer vision system, between nodes having combined coding, TCP, and pacing of packet transmissions with remote monitoring is disclosed.

In embodiments, a system for data communication, using a computer vision system, between nodes having a forward error correction code construction that interleaves groups of message packets and parity packets and has coding across overlapping groups of message packets with remote monitoring is disclosed.

In embodiments, a system for data communication, using a computer vision system, between nodes having a variant of TCP that combines delay-based back-off with a stable window increase function with remote monitoring is disclosed.

In embodiments, a system for data collection, using a computer vision system, in an industrial environment having the use of an analog cross point switch for collecting variable groups of analog sensor inputs with predictive maintenance is disclosed.

In embodiments, a system for data collection, using a computer vision system, in an industrial environment having up front signal conditioning on a multiplexer for improved signal-to-noise ratio with predictive maintenance is disclosed.

In embodiments, a system for data collection, using a computer vision system, in an industrial environment having multiplexer continuous monitoring alarming features with predictive maintenance

In embodiments, a system for data collection, using a computer vision system, in an industrial environment having the use of distributed CPLD chips with dedicated bus for logic control of multiple MUX and data acquisition sections with predictive maintenance is disclosed.

In embodiments, a system for data collection, using a computer vision system, in an industrial environment having high-amperage input capability using solid state relays and design topology with predictive maintenance is disclosed.

In embodiments, a system for data collection, using a computer vision system, in an industrial environment having power-down ability of at least one of an analog sensor channel and a component board with predictive maintenance is disclosed.

In embodiments, a system for data collection, using a computer vision system, in an industrial environment having unique electrostatic protection for trigger and vibration inputs with predictive maintenance is disclosed.

In embodiments, a system for data collection, using a computer vision system, in an industrial environment having precise voltage reference for A/D zero reference with predictive maintenance is disclosed.

In embodiments, a system for data collection, using a computer vision system, in an industrial environment having a phase-lock loop band-pass tracking filter for obtaining slow-speed RPMs and phase information with predictive maintenance is disclosed.

In embodiments, a system for data collection, using a computer vision system, in an industrial environment having digital derivation of phase relative to input and trigger channels using on-board timers with predictive maintenance is disclosed.

In embodiments, a system for data collection, using a computer vision system, in an industrial environment having a peak-detector for auto-scaling that is routed into a separate analog-to-digital converter for peak detection with predictive maintenance is disclosed.

In embodiments, a system for data collection, using a computer vision system, in an industrial environment having routing of a trigger channel that is either raw or buffered into other analog channels with predictive maintenance is disclosed.

In embodiments, a system for data collection, using a computer vision system, in an industrial environment having the use of higher input oversampling for delta-sigma A/D for lower sampling rate outputs to minimize AA filter requirements with predictive maintenance is disclosed.

In embodiments, a system for data collection, using a computer vision system in an industrial environment having the use of a CPLD as a clock-divider for a delta-sigma analog-to-digital converter to achieve lower sampling rates without the need for digital resampling with predictive maintenance is disclosed.

In embodiments, a system for data collection, using a computer vision system, in an industrial environment having long blocks of data at a high-sampling rate as opposed to multiple sets of data taken at different sampling rates with predictive maintenance is disclosed.

In embodiments, a system for data collection, using a computer vision system, in an industrial environment having storage of calibration data with maintenance history on-board card set with predictive maintenance is disclosed.

In embodiments, a system for data collection, using a computer vision system, in an industrial environment having a rapid route creation capability using hierarchical templates with predictive maintenance is disclosed.

In embodiments, a system for data collection, using a computer vision system, in an industrial environment having intelligent management of data collection bands with predictive maintenance is disclosed.

In embodiments, a system for data collection, using a computer vision system, in an industrial environment having a neural net expert system using intelligent management of data collection bands with predictive maintenance is disclosed.

In embodiments, a system for data collection, using a computer vision system, in an industrial environment having use of a database hierarchy in sensor data analysis with predictive maintenance is disclosed.

In embodiments, a system for data collection, using a computer vision system in an industrial environment having an expert system GUI graphical approach to defining intelligent data collection bands and diagnoses for the expert system with predictive maintenance is disclosed.

In embodiments, a system for data collection, using a computer vision system, in an industrial environment having a graphical approach for back-calculation definition with predictive maintenance is disclosed.

In embodiments, a system for data collection, using a computer vision system, in an industrial environment having proposed bearing analysis methods with predictive maintenance is disclosed.

In embodiments, a system for data collection, using a computer vision system, in an industrial environment having torsional vibration detection/analysis utilizing transitory signal analysis with predictive maintenance is disclosed.

In embodiments, a system for data collection, using a computer vision system, in an industrial environment having improved integration using both analog and digital methods with predictive maintenance is disclosed.

In embodiments, a system for data collection, using a computer vision system, in an industrial environment having adaptive scheduling techniques for continuous monitoring of analog data in a local environment with predictive maintenance is disclosed.

In embodiments, a system for data collection, using a computer vision system, in an industrial environment having data acquisition parking features with predictive maintenance is disclosed.

In embodiments, a system for data collection, using a computer vision system, in an industrial environment having a self-sufficient data acquisition box with predictive maintenance is disclosed.

In embodiments, a system for data collection, using a computer vision system, in an industrial environment having SD card storage with predictive maintenance is disclosed.

In embodiments, a system for data collection, using a computer vision system, in an industrial environment having extended onboard statistical capabilities for continuous monitoring with predictive maintenance is disclosed.

In embodiments, a system for data collection, using a computer vision system, in an industrial environment having the use of ambient, local and vibration noise for prediction with predictive maintenance is disclosed.

In embodiments, a system for data collection, using a computer vision system, in an industrial environment having smart route changes route based on incoming data or alarms enable simultaneous dynamic data for analysis or correlation with predictive maintenance is disclosed.

In embodiments, a system for data collection, using a computer vision system, in an industrial environment having smart ODS and transfer functions with predictive maintenance is disclosed.

In embodiments, a system for data collection, using a computer vision system, in an industrial environment having hierarchical multiplexer with predictive maintenance is disclosed.

In embodiments, a system for data collection, using a computer vision system, in an industrial environment having identification sensor overload with predictive maintenance is disclosed.

In embodiments, a system for data collection, using a computer vision system, in an industrial environment having RF identification and an inclinometer with predictive maintenance is disclosed.

In embodiments, a system for data collection, using a computer vision system, in an industrial environment having continuous ultrasonic monitoring with predictive maintenance is disclosed.

In embodiments, a system for data collection, using a computer vision system, in an industrial environment having cloud-based, machine pattern recognition based on fusion of remote, analog industrial sensors with predictive maintenance is disclosed.

In embodiments, a system for data collection, using a computer vision system, in an industrial environment having cloud-based, machine pattern analysis of state information from multiple analog industrial sensors to provide anticipated state information for an industrial system with predictive maintenance is disclosed.

In embodiments, a system for data collection, using a computer vision system, in an industrial environment having cloud-based policy automation engine for IoT, with creation, deployment and management of IoT devices with predictive maintenance is disclosed.

In embodiments, a system for data collection, using a computer vision system, in an industrial environment having on-device sensor fusion and data storage for industrial IoT devices with predictive maintenance is disclosed.

In embodiments, a system for data collection, using a computer vision system, in an industrial environment having a self-organizing data marketplace for industrial IoT data with predictive maintenance is disclosed.

In embodiments, a system for data collection, using a computer vision system, in an industrial environment having self-organization of data pools based on utilization and/or yield metrics with predictive maintenance is disclosed.

In embodiments, a system for data collection, using a computer vision system, in an industrial environment having training AI models based on industry-specific feedback with predictive maintenance is disclosed.

In embodiments, a system for data collection, using a computer vision system, in an industrial environment having a self-organized swarm of industrial data collectors with predictive maintenance is disclosed.

In embodiments, a system for data collection, using a computer vision system, in an industrial environment having an IoT distributed ledger with predictive maintenance is disclosed.

In embodiments, a system for data collection, using a computer vision system, in an industrial environment having a self-organizing collector with predictive maintenance is disclosed.

In embodiments, a system for data collection, using a computer vision system, in an industrial environment having a network-sensitive collector with predictive maintenance is disclosed.

In embodiments, a system for data collection, using a computer vision system, in an industrial environment having a remotely organized collector with predictive maintenance is disclosed.

In embodiments, a system for data collection, using a computer vision system, in an industrial environment having a self-organizing storage for a multi-sensor data collector with predictive maintenance is disclosed.

In embodiments, a system for data collection, using a computer vision system, in an industrial environment having a self-organizing network coding for multi-sensor data network with predictive maintenance is disclosed.

In embodiments, a system for data collection, using a computer vision system, in an industrial environment having a wearable haptic user interface for an industrial sensor data collector, with vibration, heat, electrical and/or sound outputs with predictive maintenance is disclosed.

In embodiments, a system for data collection, using a computer vision system, in an industrial environment having heat maps displaying collection data for AR/VR with predictive maintenance is disclosed.

In embodiments, a system for data collection, using a computer vision system, in an industrial environment having automatically tuned AR/VR visualization of data collected by a data collector with predictive maintenance is disclosed.

In embodiments, a system for data collection, using a computer vision system, in an industrial environment having an IoT platform with predictive maintenance is disclosed.

In embodiments, a system for data collection, using a computer vision system, in an industrial environment having an IoT data adapter for receiving data inputs and establishing a connection with one or more available IoT cloud platforms to publish the data with predictive maintenance is disclosed.

In embodiments, a system for data collection, using a computer vision system, in an industrial environment having a condition detector for detecting conditions related to connect attempts made by the IoT data adapter to one or more IoT cloud platforms with predictive maintenance is disclosed.

In embodiments, a system for data collection, using a computer vision system, in an industrial environment having an IoT data adapter with an adaptation engine with predictive maintenance is disclosed.

In embodiments, a system for data collection, using a computer vision system, in an industrial environment having the use of machine learning to prepare a data packet or stream with predictive maintenance is disclosed.

In embodiments, a system for data collection, using a computer vision system, in an industrial environment having a data marketplace that provides a pool of available cloud networking platforms with predictive maintenance is disclosed.

In embodiments, a system for data collection, using a computer vision system, in an industrial environment having a messaging utility that provides a cloud platform user interface with a message indicating the availability of a new data source and data source integration and usage instructions with predictive maintenance is disclosed.

In embodiments, a system for data communication, using a computer vision system, between nodes having the ability to maintain a first and second transmission limit based on received rate of arrival and success of delivery feedback messages, and limiting transmission of messages based on the transmission limits with predictive maintenance is disclosed.

In embodiments, a system for data communication, using a computer vision system, between nodes having the ability to limit transmission of further messages not yet acknowledged as successfully delivered according to the window size with predictive maintenance is disclosed.

In embodiments, a system for data communication, using a computer vision system, between nodes having the ability to maintain an estimate of a rate of loss events and use it to adjust the rate of redundancy messages with predictive maintenance is disclosed.

In embodiments, a system for data communication, using a computer vision system, between nodes having an estimated rate of loss events where the error correction code used to determine redundancy messages chosen is based on the estimated rate of loss events with predictive maintenance is disclosed.

In embodiments, a system for data communication, using a computer vision system, between nodes having the ability to apply forward error correction based on messages received describing channel characteristics with predictive maintenance is disclosed.

In embodiments, a system for data communication, using a computer vision system, between nodes having the ability to maintain/set timers based on occurrences of delivery order events and delaying transmission of feedback messages using timers with predictive maintenance is disclosed.

In embodiments, a system for data communication, using a computer vision system, between nodes having the ability to maintain/set timers based on occurrences of delivery order events and delaying modification of congestion window size based on timers with predictive maintenance is disclosed.

In embodiments, a system for data communication, using a computer vision system, between nodes having the ability to maintain/set timers based on occurrences of delivery order events, delaying modification of congestion window size based on timers, and cancelling modification of congestion window size when receiving a feedback message indicating successful delivery with predictive maintenance is disclosed.

**In** embodiments, a system for data communication, using a computer vision system, between nodes having the ability to configure a new connection using maintained data characterizing a current/previous connection with predictive maintenance is disclosed.

**In** embodiments, a system for data communication, using a computer vision system, between nodes having the ability to configure a new connection using maintained data characterizing an error rate of a current/previous connection with predictive maintenance is disclosed.

**In** embodiments, a system for data communication, using a computer vision system, between nodes having the ability to configure a new connection using maintained data characterizing a timing variability of a current/previous connection with predictive maintenance is disclosed.

**In** embodiments, a system for data communication, using a computer vision system, between nodes having the ability to configure a new connection using maintained data characterizing bandwidth of a current/previous connection with predictive maintenance is disclosed.

**In** embodiments, a system for data communication, using a computer vision system between nodes having the ability to configure a new connection using maintained data characterizing round trip time of a current/previous connection with predictive maintenance is disclosed.

**In** embodiments, a system for data communication, using a computer vision system, between nodes having the ability to configure a new connection using maintained data characterizing communication control parameters of a current/previous connection with predictive maintenance is disclosed.

**In** embodiments, a system for data communication, using a computer vision system, between nodes having the ability to configure new connection using maintained data characterizing forward error correction parameters of a current/previous connection with predictive maintenance is disclosed.

**In** embodiments, a system for data communication, using a computer vision system, between nodes having a data store for maintaining data characterizing one or more current or previous data communication connections and a connection initiation module for initiating new data communication connections based on maintained data with predictive maintenance is disclosed.

In embodiments, a system for data communication, using a computer vision system, between nodes having the ability to transmit a first subset of data messages over a lower latency data path and a second subset of messages over a higher latency data path with predictive maintenance is disclosed.

In embodiments, a system for data communication, using a computer vision system, between nodes having the ability to transmit a first subset of data messages that are time critical over a lower latency data path and a second subset of messages over a higher latency data path with predictive maintenance is disclosed.

In embodiments, a system for data communication, using a computer vision system, between nodes having the ability to transmit a first initial subset of data messages over a lower latency data path and a second subset of messages that are subsequently available over a higher latency data path with predictive maintenance is disclosed.

In embodiments, a system for data communication, using a computer vision system, between nodes having the ability to transmit a first subset of acknowledgment messages over a lower latency data path and a second subset of data messages over a higher latency data path with predictive maintenance is disclosed.

In embodiments, a system for data communication, using a computer vision system, between nodes having the ability to transmit a first subset of supplemental/redundancy data messages over a lower latency data path and a second subset of data messages over a higher latency data path with predictive maintenance is disclosed.

In embodiments, a system for data communication, using a computer vision system, between nodes having a degree of redundancy associated with each message that is based on message position in the transmission order with predictive maintenance is disclosed.

In embodiments, a system for data communication, using a computer vision system, between nodes having a degree of redundancy associated with each message that increases as the position of the messages is non-decreasing with predictive maintenance is disclosed.

In embodiments, a system for data communication, using a computer vision system, between nodes having a degree of redundancy associated with each message that is based on message position in the transmission order and in response to receiving feedback messages with predictive maintenance is disclosed.

In embodiments, a system for data communication, using a computer vision system, between nodes having a degree of redundancy associated with each message that is based on message position in the transmission order and in response to receiving feedback messages, and adding or removing redundancy messages from the queue based on the feedback messages with predictive maintenance is disclosed.

In embodiments, a system for data communication, using a computer vision system, between nodes having the ability to adjust the number of messages sent over each of multiple different data paths with different communication protocols if it is determined that a data path is altering flow of messages with predictive maintenance

In embodiments, a system for data communication, using a computer vision system, between nodes having the ability to adjust the number of messages sent over each of multiple different data paths with different communication protocols if it is determined that a data path is altering flow of messages initial division based on previous communication connections with predictive maintenance is disclosed.

In embodiments, a system for data communication, using a computer vision system, between nodes having the ability to modify/add/remove redundancy information associated with encoded data as it travels from node to node via channels based on channel characteristics with predictive maintenance is disclosed.

In embodiments, a system for data communication, using a computer vision system, between nodes having the ability to send FEC packets at an estimated rate of loss events (isolated packet loss or burst of consecutive packets) with predictive maintenance is disclosed.

In embodiments, a system for data communication, using a computer vision system, between nodes having combined coding, TCP, and pacing of packet transmissions with predictive maintenance is disclosed.

In embodiments, a system for data communication, using a computer vision system, between nodes having a forward error correction code construction that interleaves groups of message packets and parity packets and has coding across overlapping groups of message packets with predictive maintenance is disclosed.

In embodiments, a system for data communication, using a computer vision system, between nodes having a variant of TCP that combines delay-based back-off with a stable window increase function with predictive maintenance is disclosed.

In embodiments, a system for data collection, using a computer vision system, in an industrial environment having the use of an analog cross point switch for collecting variable groups of analog sensor inputs with pattern recognition is disclosed.

In embodiments, a system for data collection, using a computer vision system, in an industrial environment having up front signal conditioning on a multiplexer for improved signal-to-noise ratio with pattern recognition is disclosed.

In embodiments, a system for data collection, using a computer vision system, in an industrial environment having multiplexer continuous monitoring alarming features with pattern recognition is disclosed.

In embodiments, a system for data collection, using a computer vision system, in an industrial environment having the use of distributed CPLD chips with dedicated bus for logic control of multiple MUX and data acquisition sections with pattern recognition is disclosed.

In embodiments, a system for data collection, using a computer vision system, in an industrial environment having high-amperage input capability using solid state relays and design topology with pattern recognition is disclosed.

In embodiments, a system for data collection, using a computer vision system, in an industrial environment having power-down ability of at least one of an analog sensor channel and a component board with pattern recognition is disclosed.

In embodiments, a system for data collection, using a computer vision system, in an industrial environment having unique electrostatic protection for trigger and vibration inputs with pattern recognition is disclosed.

In embodiments, a system for data collection, using a computer vision system, in an industrial environment having precise voltage reference for A/D zero reference with pattern recognition is disclosed.

In embodiments, a system for data collection, using a computer vision system, in an industrial environment having a phase-lock loop band-pass tracking filter for obtaining slow-speed RPMs and phase information with pattern recognition is disclosed.

In embodiments, a system for data collection, using a computer vision system, in an industrial environment having digital derivation of phase relative to input and trigger channels using on-board timers with pattern recognition is disclosed.

In embodiments, a system for data collection, using a computer vision system, in an industrial environment having a peak-detector for auto-scaling that is routed into a separate analog-to-digital converter for peak detection with pattern recognition is disclosed.

In embodiments, a system for data collection, using a computer vision system, in an industrial environment having routing of a trigger channel that is either raw or buffered into other analog channels with pattern recognition is disclosed.

In embodiments, a system for data collection, using a computer vision system, in an industrial environment having the use of higher input oversampling for delta-sigma A/D for lower sampling rate outputs to minimize AA filter requirements with pattern recognition is disclosed.

In embodiments, a system for data collection, using a computer vision system, in an industrial environment having the use of a CPLD as a clock-divider for a delta-sigma analog-to-digital converter to achieve lower sampling rates without the need for digital resampling with pattern recognition is disclosed.

In embodiments, a system for data collection, using a computer vision system, in an industrial environment having long blocks of data at a high-sampling rate as opposed to multiple sets of data taken at different sampling rates with pattern recognition is disclosed.

In embodiments, a system for data collection, using a computer vision system, in an industrial environment having storage of calibration data with maintenance history on-board card set with pattern recognition is disclosed.

In embodiments, a system for data collection, using a computer vision system, in an industrial environment having a rapid route creation capability using hierarchical templates with pattern recognition is disclosed.

In embodiments, a system for data collection, using a computer vision system, in an industrial environment having intelligent management of data collection bands with pattern recognition is disclosed.

In embodiments, a system for data collection, using a computer vision system, in an industrial environment having a neural net expert system using intelligent management of data collection bands with pattern recognition is disclosed.

In embodiments, a system for data collection, using a computer vision system, in an industrial environment having use of a database hierarchy in sensor data analysis with pattern recognition is disclosed.

In embodiments, a system for data collection, using a computer vision system, in an industrial environment having an expert system GUI graphical approach to defining intelligent data collection bands and diagnoses for the expert system with pattern recognition is disclosed.

In embodiments, a system for data collection, using a computer vision system, in an industrial environment having a graphical approach for back-calculation definition with pattern recognition is disclosed.

In embodiments, a system for data collection, using a computer vision system, in an industrial environment having proposed bearing analysis methods with pattern recognition is disclosed.

In embodiments, a system for data collection, using a computer vision system, in an industrial environment having torsional vibration detection/analysis utilizing transitory signal analysis with pattern recognition is disclosed.

In embodiments, a system for data collection, using a computer vision system, in an industrial environment having improved integration using both analog and digital methods with pattern recognition is disclosed.

In embodiments, a system for data collection, using a computer vision system, in an industrial environment having adaptive scheduling techniques for continuous monitoring of analog data in a local environment with pattern recognition is disclosed.

In embodiments, a system for data collection, using a computer vision system, in an industrial environment having data acquisition parking features with pattern recognition is disclosed.

In embodiments, a system for data collection, using a computer vision system, in an industrial environment having a self-sufficient data acquisition box with pattern recognition is disclosed.

In embodiments, a system for data collection, using a computer vision system, in an industrial environment having SD card storage with pattern recognition is disclosed.

In embodiments, a system for data collection, using a computer vision system, in an industrial environment having extended onboard statistical capabilities for continuous monitoring with pattern recognition is disclosed.

In embodiments, a system for data collection, using a computer vision system, in an industrial environment having the use of ambient, local and vibration noise for prediction with pattern recognition is disclosed.

In embodiments, a system for data collection, using a computer vision system, in an industrial environment having smart route changes route based on incoming data or alarms enable simultaneous dynamic data for analysis or correlation with pattern recognition is disclosed.

In embodiments, a system for data collection, using a computer vision system, in an industrial environment having smart ODS and transfer functions with pattern recognition is disclosed.

In embodiments, a system for data collection, using a computer vision system, in an industrial environment having hierarchical multiplexer with pattern recognition is disclosed.

In embodiments, a system for data collection, using a computer vision system, in an industrial environment having identification sensor overload with pattern recognition is disclosed.

In embodiments, a system for data collection, using a computer vision system, in an industrial environment having RF identification and an inclinometer with pattern recognition is disclosed.

In embodiments, a system for data collection, using a computer vision system, in an industrial environment having continuous ultrasonic monitoring with pattern recognition is disclosed.

In embodiments, a system for data collection, using a computer vision system, in an industrial environment having cloud-based, machine pattern recognition based on fusion of remote, analog industrial sensors with pattern recognition is disclosed.

In embodiments, a system for data collection, using a computer vision system, in an industrial environment having cloud-based, machine pattern analysis of state information from multiple analog industrial sensors to provide anticipated state information for an industrial system with pattern recognition is disclosed.

In embodiments, a system for data collection, using a computer vision system, in an industrial environment having cloud-based policy automation engine for IoT, with creation, deployment and management of IoT devices with pattern recognition is disclosed.

In embodiments, a system for data collection, using a computer vision system, in an industrial environment having on-device sensor fusion and data storage for industrial IoT devices with pattern recognition is disclosed.

In embodiments, a system for data collection, using a computer vision system, in an industrial environment having a self-organizing data marketplace for industrial IoT data with pattern recognition is disclosed.

In embodiments, a system for data collection, using a computer vision system, in an industrial environment having self-organization of data pools based on utilization and/or yield metrics with pattern recognition is disclosed.

In embodiments, a system for data collection, using a computer vision system, in an industrial environment having training AI models based on industry-specific feedback with pattern recognition is disclosed.

In embodiments, a system for data collection, using a computer vision system, in an industrial environment having a self-organized swarm of industrial data collectors with pattern recognition is disclosed.

In embodiments, a system for data collection, using a computer vision system, in an industrial environment having an IoT distributed ledger with pattern recognition is disclosed.

In embodiments, a system for data collection, using a computer vision system, in an industrial environment having a self-organizing collector with pattern recognition is disclosed.

In embodiments, a system for data collection, using a computer vision system, in an industrial environment having a network-sensitive collector with pattern recognition is disclosed.

In embodiments, a system for data collection, using a computer vision system in an industrial environment having a remotely organized collector with pattern recognition is disclosed.

In embodiments, a system for data collection, using a computer vision system, in an industrial environment having a self-organizing storage for a multi-sensor data collector with pattern recognition is disclosed.

In embodiments, a system for data collection, using a computer vision system, in an industrial environment having a self-organizing network coding for multi-sensor data network with pattern recognition is disclosed.

In embodiments, a system for data collection, using a computer vision system, in an industrial environment having a wearable haptic user interface for an industrial sensor data collector, with vibration, heat, electrical and/or sound outputs with pattern recognition is disclosed.

In embodiments, a system for data collection, using a computer vision system, in an industrial environment having heat maps displaying collection data for AR/VR with pattern recognition is disclosed.

In embodiments, a system for data collection, using a computer vision system, in an industrial environment having automatically tuned AR/VR visualization of data collected by a data collector with pattern recognition is disclosed.

In embodiments, a system for data collection, using a computer vision system, in an industrial environment having an IoT platform with pattern recognition is disclosed.

In embodiments, a system for data collection, using a computer vision system, in an industrial environment having an IoT data adapter for receiving data inputs and establishing a connection with one or more available IoT cloud platforms to publish the data with pattern recognition is disclosed.

In embodiments, a system for data collection, using a computer vision system, in an industrial environment having a condition detector for detecting conditions related to connect attempts made by the IoT data adapter to one or more IoT cloud platforms with pattern recognition is disclosed.

In embodiments, a system for data collection, using a computer vision system, in an industrial environment having an IoT data adapter with an adaptation engine with pattern recognition is disclosed.

In embodiments, a system for data collection, using a computer vision system, in an industrial environment having the use of machine learning to prepare a data packet or stream with pattern recognition is disclosed.

In embodiments, a system for data collection, using a computer vision system, in an industrial environment having a data marketplace that provides a pool of available cloud networking platforms with pattern recognition is disclosed.

In embodiments, a system for data collection, using a computer vision system, in an industrial environment having a messaging utility that provides a cloud platform user interface with a message indicating the availability of a new data source and data source integration and usage instructions with pattern recognition is disclosed.

In embodiments, a system for data communication, using a computer vision system, between nodes having the ability to maintain a first and second transmission limit based on received rate of arrival and success of delivery feedback messages, and limiting transmission of messages based on the transmission limits with pattern recognition is disclosed.

In embodiments, a system for data communication, using a computer vision system, between nodes having the ability to limit transmission of further messages not yet acknowledged as successfully delivered according to the window size with pattern recognition is disclosed.

In embodiments, a system for data communication, using a computer vision system, between nodes having the ability to maintain an estimate of a rate of loss events and use it to adjust the rate of redundancy messages with pattern recognition is disclosed.

In embodiments, a system for data communication, using a computer vision system, between nodes having an estimated rate of loss events where the error correction code used to determine redundancy messages chosen is based on the estimated rate of loss events with pattern recognition is disclosed.

In embodiments, a system for data communication, using a computer vision system, between nodes having the ability to apply forward error correction based on messages received describing channel characteristics with pattern recognition is disclosed.

In embodiments, a system for data communication, using a computer vision system, between nodes having the ability to maintain/set timers based on occurrences of delivery order events and delaying transmission of feedback messages using timers with pattern recognition is disclosed.

In embodiments, a system for data communication, using a computer vision system, between nodes having the ability to maintain/set timers based on occurrences of delivery order events and delaying modification of congestion window size based on timers with pattern recognition is disclosed.

In embodiments, a system for data communication, using a computer vision system, between nodes having the ability to maintain/set timers based on occurrences of delivery order events, delaying modification of congestion window size based on timers, and cancelling modification of congestion window size when receiving a feedback message indicating successful delivery with pattern recognition is disclosed.

In embodiments, a system for data communication, using a computer vision system, between nodes having the ability to configure a new connection using maintained data characterizing a current/previous connection with pattern recognition is disclosed.

In embodiments, a system for data communication, using a computer vision system, between nodes having the ability to configure a new connection using maintained data characterizing an error rate of a current/previous connection with pattern recognition is disclosed.

In embodiments, a system for data communication, using a computer vision system, between nodes having the ability to configure a new connection using maintained data characterizing a timing variability of a current/previous connection with pattern recognition is disclosed.

In embodiments, a system for data communication, using a computer vision system, between nodes having the ability to configure a new connection using maintained data characterizing bandwidth of a current/previous connection with pattern recognition is disclosed.

In embodiments, a system for data communication, using a computer vision system, between nodes having the ability to configure a new connection using maintained data characterizing round trip time of a current/previous connection with pattern recognition is disclosed.

In embodiments, a system for data communication, using a computer vision system, between nodes having the ability to configure a new connection using maintained data characterizing communication control parameters of a current/previous connection with pattern recognition is disclosed.

In embodiments, a system for data communication, using a computer vision system, between nodes having the ability to configure new connection using maintained data characterizing forward error correction parameters of a current/previous connection with pattern recognition is disclosed.

In embodiments, a system for data communication, using a computer vision system, between nodes having a data store for maintaining data characterizing one or more current or previous data communication connections and a connection initiation module for initiating new data communication connections based on maintained data with pattern recognition is disclosed.

In embodiments, a system for data communication, using a computer vision system, between nodes having the ability to transmit a first subset of data messages over a lower latency data path and a second subset of messages over a higher latency data path with pattern recognition is disclosed.

In embodiments, a system for data communication, using a computer vision system, between nodes having the ability to transmit a first subset of data messages that are time critical over a lower latency data path and a second subset of messages over a higher latency data path with pattern recognition is disclosed.

In embodiments, a system for data communication, using a computer vision system, between nodes having the ability to transmit a first initial subset of data messages over a lower latency data path and a second subset of messages that are subsequently available over a higher latency data path with pattern recognition is disclosed.

In embodiments, a system for data communication, using a computer vision system, between nodes having the ability to transmit a first subset of acknowledgment messages over a lower latency data path and a second subset of data messages over a higher latency data path with pattern recognition is disclosed.

In embodiments, a system for data communication, using a computer vision system, between nodes having the ability to transmit a first subset of supplemental/redundancy data messages over a lower latency data path and a second subset of data messages over a higher latency data path with pattern recognition is disclosed.

In embodiments, a system for data communication, using a computer vision system, between nodes having a degree of redundancy associated with each message that is based on message position in the transmission order with pattern recognition is disclosed.

In embodiments, a system for data communication, using a computer vision system, between nodes having a degree of redundancy associated with each message that increases as the position of the messages is non-decreasing with pattern recognition is disclosed.

In embodiments, a system for data communication, using a computer vision system, between nodes having a degree of redundancy associated with each message that is based on message position in the transmission order and in response to receiving feedback messages with pattern recognition is disclosed.

In embodiments, a system for data communication, using a computer vision system, between nodes having a degree of redundancy associated with each message that is based on message position in the transmission order and in response to receiving feedback messages, and adding or removing redundancy messages from the queue based on the feedback messages with pattern recognition is disclosed.

In embodiments, a system for data communication, using a computer vision system, between nodes having the ability to adjust the number of messages sent over each of multiple different data paths with different communication protocols if it is determined that a data path is altering flow of messages with pattern recognition is disclosed.

In embodiments, a system for data communication, using a computer vision system, between nodes having the ability to adjust the number of messages sent over each of multiple different data paths with different communication protocols if it is determined that a data path is altering flow of messages initial division based on previous communication connections with pattern recognition is disclosed.

In embodiments, a system for data communication, using a computer vision system, between nodes having the ability to modify/add/remove redundancy information associated with encoded data as it travels from node to node via channels based on channel characteristics with pattern recognition is disclosed.

In embodiments, a system for data communication, using a computer vision system, between nodes having the ability to send FEC packets at an estimated rate of loss events (isolated packet loss or burst of consecutive packets) with pattern recognition is disclosed.

In embodiments, a system for data communication, using a computer vision system, between nodes having combined coding, TCP, and pacing of packet transmissions with pattern recognition is disclosed.

In embodiments, a system for data communication, using a computer vision system, between nodes having a forward error correction code construction that interleaves groups of message packets and parity packets and has coding across overlapping groups of message packets with pattern recognition is disclosed.

In embodiments, a system for data communication, using a computer vision system, between nodes having a variant of TCP that combines delay-based back-off with a stable window increase function with pattern recognition is disclosed.

In embodiments, a system for data collection, using a computer vision system, in an industrial environment having the use of an analog cross point switch for collecting variable groups of analog sensor inputs for manufacturing is disclosed.

In embodiments, a system for data collection, using a computer vision system, in an industrial environment having up front signal conditioning on a multiplexer for improved signal-to-noise ratio for manufacturing is disclosed.

In embodiments, a system for data collection, using a computer vision system, in an industrial environment having multiplexer continuous monitoring alarming features for manufacturing is disclosed.

In embodiments, a system for data collection, using a computer vision system, in an industrial environment having the use of distributed CPLD chips with dedicated bus for logic control of multiple MUX and data acquisition sections for manufacturing is disclosed.

In embodiments, a system for data collection, using a computer vision system, in an industrial environment having high-amperage input capability using solid state relays and design topology for manufacturing is disclosed.

In embodiments, a system for data collection, using a computer vision system, in an industrial environment having power-down ability of at least one of an analog sensor channel and a component board for manufacturing is disclosed.

In embodiments, a system for data collection, using a computer vision system, in an industrial environment having unique electrostatic protection for trigger and vibration inputs for manufacturing is disclosed.

In embodiments, a system for data collection, using a computer vision system, in an industrial environment having precise voltage reference for A/D zero reference for manufacturing is disclosed.

In embodiments, a system for data collection, using a computer vision system, in an industrial environment having a phase-lock loop band-pass tracking filter for obtaining slow-speed RPMs and phase information for manufacturing is disclosed.

In embodiments, a system for data collection, using a computer vision system, in an industrial environment having digital derivation of phase relative to input and trigger channels using on-board timers for manufacturing is disclosed.

In embodiments, a system for data collection, using a computer vision system, in an industrial environment having a peak-detector for auto-scaling that is routed into a separate analog-to-digital converter for peak detection for manufacturing is disclosed.

In embodiments, a system for data collection, using a computer vision system, in an industrial environment having routing of a trigger channel that is either raw or buffered into other analog channels for manufacturing is disclosed.

In embodiments, a system for data collection, using a computer vision system, in an industrial environment having the use of higher input oversampling for delta-sigma A/D for lower sampling rate outputs to minimize AA filter requirements for manufacturing is disclosed.

In embodiments, a system for data collection, using a computer vision system, in an industrial environment having the use of a CPLD as a clock-divider for a delta-sigma analog-to-digital converter to achieve lower sampling rates without the need for digital resampling for manufacturing is disclosed.

In embodiments, a system for data collection, using a computer vision system, in an industrial environment having long blocks of data at a high-sampling rate as opposed to multiple sets of data taken at different sampling rates for manufacturing is disclosed.

In embodiments, a system for data collection, using a computer vision system, in an industrial environment having storage of calibration data with maintenance history on-board card set for manufacturing is disclosed.

In embodiments, a system for data collection, using a computer vision system, in an industrial environment having a rapid route creation capability using hierarchical templates for manufacturing is disclosed.

In embodiments, a system for data collection, using a computer vision system, in an industrial environment having intelligent management of data collection bands for manufacturing is disclosed.

In embodiments, a system for data collection, using a computer vision system, in an industrial environment having a neural net expert system using intelligent management of data collection bands for manufacturing is disclosed.

In embodiments, a system for data collection, using a computer vision system, in an industrial environment having use of a database hierarchy in sensor data analysis for manufacturing is disclosed.

In embodiments, a system for data collection, using a computer vision system, in an industrial environment having an expert system GUI graphical approach to defining intelligent data collection bands and diagnoses for the expert system for manufacturing is disclosed.

In embodiments, a system for data collection, using a computer vision system, in an industrial environment having a graphical approach for back-calculation definition for manufacturing is disclosed.

In embodiments, a system for data collection, using a computer vision system, in an industrial environment having proposed bearing analysis methods for manufacturing is disclosed.

In embodiments, a system for data collection, using a computer vision system, in an industrial environment having torsional vibration detection/analysis utilizing transitory signal analysis for manufacturing is disclosed.

In embodiments, a system for data collection, using a computer vision system, in an industrial environment having improved integration using both analog and digital methods for manufacturing is disclosed.

In embodiments, a system for data collection, using a computer vision system, in an industrial environment having adaptive scheduling techniques for continuous monitoring of analog data in a local environment for manufacturing is disclosed.

In embodiments, a system for data collection, using a computer vision system, in an industrial environment having data acquisition parking features for manufacturing is disclosed.

In embodiments, a system for data collection, using a computer vision system, in an industrial environment having a self-sufficient data acquisition box for manufacturing is disclosed.

In embodiments, a system for data collection, using a computer vision system, in an industrial environment having SD card storage for manufacturing is disclosed.

In embodiments, a system for data collection, using a computer vision system, in an industrial environment having extended onboard statistical capabilities for continuous monitoring for manufacturing is disclosed.

In embodiments, a system for data collection, using a computer vision system, in an industrial environment having the use of ambient, local and vibration noise for prediction for manufacturing is disclosed.

In embodiments, a system for data collection, using a computer vision system, in an industrial environment having smart route changes route based on incoming data or alarms enable simultaneous dynamic data for analysis or correlation for manufacturing is disclosed.

In embodiments, a system for data collection, using a computer vision system, in an industrial environment having smart ODS and transfer functions for manufacturing is disclosed.

In embodiments, a system for data collection, using a computer vision system, in an industrial environment having hierarchical multiplexer for manufacturing is disclosed.

In embodiments, a system for data collection, using a computer vision system, in an industrial environment having identification sensor overload for manufacturing is disclosed.

In embodiments, a system for data collection, using a computer vision system, in an industrial environment having RF identification and an inclinometer for manufacturing is disclosed.

In embodiments, a system for data collection, using a computer vision system, in an industrial environment having continuous ultrasonic monitoring for manufacturing is disclosed.

In embodiments, a system for data collection, using a computer vision system, in an industrial environment having cloud-based, machine pattern recognition based on fusion of remote, analog industrial sensors for manufacturing is disclosed.

In embodiments, a system for data collection, using a computer vision system, in an industrial environment having cloud-based, machine pattern analysis of state information from multiple analog industrial sensors to provide anticipated state information for an industrial system for manufacturing is disclosed.

In embodiments, a system for data collection, using a computer vision system, in an industrial environment having cloud-based policy automation engine for IoT, with creation, deployment and management of IoT devices for manufacturing is disclosed.

In embodiments, a system for data collection, using a computer vision system, in an industrial environment having on-device sensor fusion and data storage for industrial IoT devices for manufacturing is disclosed.

In embodiments, a system for data collection, using a computer vision system, in an industrial environment having a self-organizing data marketplace for industrial IoT data for manufacturing is disclosed.

In embodiments, a system for data collection, using a computer vision system, in an industrial environment having self-organization of data pools based on utilization and/or yield metrics for manufacturing is disclosed.

In embodiments, a system for data collection, using a computer vision system, in an industrial environment having training AI models based on industry-specific feedback for manufacturing is disclosed.

In embodiments, a system for data collection, using a computer vision system, in an industrial environment having a self-organized swarm of industrial data collectors for manufacturing is disclosed.

In embodiments, a system for data collection, using a computer vision system, in an industrial environment having an IoT distributed ledger for manufacturing is disclosed.

In embodiments, a system for data collection, using a computer vision system, in an industrial environment having a self-organizing collector for manufacturing is disclosed.

In embodiments, a system for data collection, using a computer vision system, in an industrial environment having a network-sensitive collector for manufacturing is disclosed.

In embodiments, a system for data collection, using a computer vision system, in an industrial environment having a remotely organized collector for manufacturing is disclosed.

In embodiments, a system for data collection, using a computer vision system, in an industrial environment having a self-organizing storage for a multi-sensor data collector for manufacturing is disclosed.

In embodiments, a system for data collection, using a computer vision system, in an industrial environment having a self-organizing network coding for multi-sensor data network for manufacturing is disclosed.

In embodiments, a system for data collection, using a computer vision system, in an industrial environment having a wearable haptic user interface for an industrial sensor data collector, with vibration, heat, electrical and/or sound outputs for manufacturing is disclosed.

In embodiments, a system for data collection, using a computer vision system, in an industrial environment having heat maps displaying collection data for AR/VR for manufacturing is disclosed.

In embodiments, a system for data collection, using a computer vision system, in an industrial environment having automatically tuned AR/VR visualization of data collected by a data collector for manufacturing is disclosed.

In embodiments, a system for data collection, using a computer vision system, in an industrial environment having an IoT platform for manufacturing is disclosed.

In embodiments, a system for data collection, using a computer vision system, in an industrial environment having an IoT data adapter for receiving data inputs and establishing a connection with one or more available IoT cloud platforms to publish the data for manufacturing is disclosed.

In embodiments, a system for data collection, using a computer vision system, in an industrial environment having a condition detector for detecting conditions related to connect attempts made by the IoT data adapter to one or more IoT cloud platforms for manufacturing is disclosed.

In embodiments, a system for data collection, using a computer vision system, in an industrial environment having an IoT data adapter with an adaptation engine for manufacturing is disclosed.

In embodiments, a system for data collection, using a computer vision system, in an industrial environment having the use of machine learning to prepare a data packet or stream for manufacturing is disclosed.

In embodiments, a system for data collection, using a computer vision system, in an industrial environment having a data marketplace that provides a pool of available cloud networking platforms for manufacturing is disclosed.

In embodiments, a system for data collection, using a computer vision system, in an industrial environment having a messaging utility that provides a cloud platform user interface with a message indicating the availability of a new data source and data source integration and usage instructions for manufacturing is disclosed.

In embodiments, a system for data communication, using a computer vision system, between nodes having the ability to maintain a first and second transmission limit based on received rate of arrival and success of delivery feedback messages, and limiting transmission of messages based on the transmission limits for manufacturing is disclosed.

In embodiments, a system for data communication, using a computer vision system, between nodes having the ability to limit transmission of further messages not yet acknowledged as successfully delivered according to the window size for manufacturing is disclosed.

In embodiments, a system for data communication, using a computer vision system, between nodes having the ability to maintain an estimate of a rate of loss events and use it to adjust the rate of redundancy messages for manufacturing is disclosed.

In embodiments, a system for data communication, using a computer vision system, between nodes having an estimated rate of loss events where the error correction code used to determine redundancy messages chosen is based on the estimated rate of loss events for manufacturing is disclosed.

In embodiments, a system for data communication, using a computer vision system, between nodes having the ability to apply forward error correction based on messages received describing channel characteristics for manufacturing is disclosed.

In embodiments, a system for data communication, using a computer vision system, between nodes having the ability to maintain/set timers based on occurrences of delivery order events and delaying transmission of feedback messages using timers for manufacturing is disclosed.

In embodiments, a system for data communication, using a computer vision system, between nodes having the ability to maintain/set timers based on occurrences of delivery order events and delaying modification of congestion window size based on timers for manufacturing is disclosed.

In embodiments, a system for data communication, using a computer vision system, between nodes having the ability to maintain/set timers based on occurrences of delivery order events, delaying modification of congestion window size based on timers, and cancelling modification of congestion window size when receiving a feedback message indicating successful delivery for manufacturing is disclosed.

In embodiments, a system for data communication, using a computer vision system, between nodes having the ability to configure a new connection using maintained data characterizing a current/previous connection for manufacturing is disclosed.

In embodiments, a system for data communication, using a computer vision system, between nodes having the ability to configure a new connection using maintained data characterizing an error rate of a current/previous connection for manufacturing is disclosed.

In embodiments, a system for data communication, using a computer vision system, between nodes having the ability to configure a new connection using maintained data characterizing a timing variability of a current/previous connection for manufacturing is disclosed.

In embodiments, a system for data communication, using a computer vision system, between nodes having the ability to configure a new connection using maintained data characterizing bandwidth of a current/previous connection for manufacturing is disclosed.

In embodiments, a system for data communication, using a computer vision system, between nodes having the ability to configure a new connection using maintained data characterizing round trip time of a current/previous connection for manufacturing is disclosed.

In embodiments, a system for data communication, using a computer vision system, between nodes having the ability to configure a new connection using maintained data characterizing communication control parameters of a current/previous connection for manufacturing is disclosed.

In embodiments, a system for data communication, using a computer vision system, between nodes having the ability to configure new connection using maintained data characterizing forward error correction parameters of a current/previous connection for manufacturing is disclosed.

In embodiments, a system for data communication, using a computer vision system, between nodes having a data store for maintaining data characterizing one or more current or previous data communication connections and a connection initiation module for initiating new data communication connections based on maintained data for manufacturing is disclosed.

In embodiments, a system for data communication, using a computer vision system, between nodes having the ability to transmit a first subset of data messages over a lower latency data path and a second subset of messages over a higher latency data path for manufacturing is disclosed.

In embodiments, a system for data communication, using a computer vision system, between nodes having the ability to transmit a first subset of data messages that are time critical over a lower latency data path and a second subset of messages over a higher latency data path for manufacturing is disclosed.

In embodiments, a system for data communication, using a computer vision system, between nodes having the ability to transmit a first initial subset of data messages over a lower latency data path and a second subset of messages that are subsequently available over a higher latency data path for manufacturing is disclosed.

In embodiments, a system for data communication, using a computer vision system, between nodes having the ability to transmit a first subset of acknowledgment messages over a lower latency data path and a second subset of data messages over a higher latency data path for manufacturing is disclosed.

In embodiments, a system for data communication, using a computer vision system, between nodes having the ability to transmit a first subset of supplemental/redundancy data messages over a lower latency data path and a second subset of data messages over a higher latency data path for manufacturing is disclosed.

In embodiments, a system for data communication, using a computer vision system, between nodes having a degree of redundancy associated with each message that is based on message position in the transmission order for manufacturing is disclosed.

In embodiments, a system for data communication, using a computer vision system, between nodes having a degree of redundancy associated with each message that increases as the position of the messages is non-decreasing for manufacturing is disclosed.

In embodiments, a system for data communication, using a computer vision system, between nodes having a degree of redundancy associated with each message that is based on message position in the transmission order and in response to receiving feedback messages for manufacturing is disclosed.

In embodiments, a system for data communication, using a computer vision system, between nodes having a degree of redundancy associated with each message that is based on message position in the transmission order and in response to receiving feedback messages, and adding or removing redundancy messages from the queue based on the feedback messages for manufacturing is disclosed.

In embodiments, a system for data communication, using a computer vision system, between nodes having the ability to adjust the number of messages sent over each of multiple different data paths with different communication protocols if it is determined that a data path is altering flow of messages for manufacturing is disclosed.

In embodiments, a system for data communication, using a computer vision system, between nodes having the ability to adjust the number of messages sent over each of multiple different data paths with different communication protocols if it is determined that a data path is altering flow of messages initial division based on previous communication connections for manufacturing is disclosed.

In embodiments, a system for data communication, using a computer vision system, between nodes having the ability to modify/add/remove redundancy information associated with encoded data as it travels from node to node via channels based on channel characteristics for manufacturing is disclosed.

In embodiments, a system for data communication, using a computer vision system, between nodes having the ability to send FEC packets at an estimated rate of loss events (isolated packet loss or burst of consecutive packets) for manufacturing is disclosed.

In embodiments, a system for data communication, using a computer vision system, between nodes having combined coding, TCP, and pacing of packet transmissions for manufacturing is disclosed.

In embodiments, a system for data communication, using a computer vision system, between nodes having a forward error correction code construction that interleaves groups of message packets and parity packets and has coding across overlapping groups of message packets for manufacturing is disclosed.

In embodiments, a system for data communication, using a computer vision system, between nodes having a variant of TCP that combines delay-based back-off with a stable window increase function for manufacturing is disclosed.

In embodiments, a system for data collection, using a computer vision system, in an industrial environment having the use of an analog cross point switch for collecting variable groups of analog sensor inputs for fossil fuel energy production is disclosed.

In embodiments, a system for data collection, using a computer vision system, in an industrial environment having up front signal conditioning on a multiplexer for improved signal-to-noise ratio for fossil fuel energy production is disclosed.

In embodiments, a system for data collection, using a computer vision system, in an industrial environment having multiplexer continuous monitoring alarming features for fossil fuel energy production is disclosed.

In embodiments, a system for data collection, using a computer vision system, in an industrial environment having the use of distributed CPLD chips with dedicated bus for logic control of multiple MUX and data acquisition sections for fossil fuel energy production is disclosed.

In embodiments, a system for data collection, using a computer vision system, in an industrial environment having high-amperage input capability using solid state relays and design topology for fossil fuel energy production is disclosed.

In embodiments, a system for data collection, using a computer vision system, in an industrial environment having power-down ability of at least one of an analog sensor channel and a component board for fossil fuel energy production is disclosed.

In embodiments, a system for data collection, using a computer vision system, in an industrial environment having unique electrostatic protection for trigger and vibration inputs for fossil fuel energy production is disclosed.

In embodiments, a system for data collection, using a computer vision system, in an industrial environment having precise voltage reference for A/D zero reference for fossil fuel energy production is disclosed.

In embodiments, a system for data collection, using a computer vision system, in an industrial environment having a phase-lock loop band-pass tracking filter for obtaining slow-speed RPMs and phase information for fossil fuel energy production is disclosed.

In embodiments, a system for data collection, using a computer vision system, in an industrial environment having digital derivation of phase relative to input and trigger channels using on-board timers for fossil fuel energy production is disclosed.

In embodiments, a system for data collection, using a computer vision system, in an industrial environment having a peak-detector for auto-scaling that is routed into a separate analog-to-digital converter for peak detection for fossil fuel energy production is disclosed.

In embodiments, a system for data collection, using a computer vision system, in an industrial environment having routing of a trigger channel that is either raw or buffered into other analog channels for fossil fuel energy production is disclosed.

In embodiments, a system for data collection, using a computer vision system, in an industrial environment having the use of higher input oversampling for delta-sigma A/D for lower sampling rate outputs to minimize AA filter requirements for fossil fuel energy production is disclosed.

In embodiments, a system for data collection, using a computer vision system, in an industrial environment having the use of a CPLD as a clock-divider for a delta-sigma analog-to-digital converter to achieve lower sampling rates without the need for digital resampling for fossil fuel energy production is disclosed.

In embodiments, a system for data collection, using a computer vision system, in an industrial environment having long blocks of data at a high-sampling rate as opposed to multiple sets of data taken at different sampling rates for fossil fuel energy production is disclosed.

In embodiments, a system for data collection, using a computer vision system, in an industrial environment having storage of calibration data with maintenance history on-board card set for fossil fuel energy production is disclosed.

In embodiments, a system for data collection, using a computer vision system, in an industrial environment having a rapid route creation capability using hierarchical templates for fossil fuel energy production is disclosed.

In embodiments, a system for data collection, using a computer vision system, in an industrial environment having intelligent management of data collection bands for fossil fuel energy production is disclosed.

In embodiments, a system for data collection, using a computer vision system, in an industrial environment having a neural net expert system using intelligent management of data collection bands for fossil fuel energy production is disclosed.

In embodiments, a system for data collection, using a computer vision system, in an industrial environment having use of a database hierarchy in sensor data analysis for fossil fuel energy production is disclosed.

In embodiments, a system for data collection, using a computer vision system, in an industrial environment having an expert system GUI graphical approach to defining intelligent data collection bands and diagnoses for the expert system for fossil fuel energy production is disclosed.

In embodiments, a system for data collection, using a computer vision system, in an industrial environment having a graphical approach for back-calculation definition for fossil fuel energy production is disclosed.

In embodiments, a system for data collection, using a computer vision system, in an industrial environment having proposed bearing analysis methods for fossil fuel energy production is disclosed.

In embodiments, a system for data collection, using a computer vision system, in an industrial environment having torsional vibration detection/analysis utilizing transitory signal analysis for fossil fuel energy production is disclosed.

In embodiments, a system for data collection, using a computer vision system, in an industrial environment having improved integration using both analog and digital methods for fossil fuel energy production is disclosed.

In embodiments, a system for data collection, using a computer vision system, in an industrial environment having adaptive scheduling techniques for continuous monitoring of analog data in a local environment for fossil fuel energy production is disclosed.

In embodiments, a system for data collection, using a computer vision system, in an industrial environment having data acquisition parking features for fossil fuel energy production is disclosed.

In embodiments, a system for data collection, using a computer vision system, in an industrial environment having a self-sufficient data acquisition box for fossil fuel energy production is disclosed.

In embodiments, a system for data collection, using a computer vision system, in an industrial environment having SD card storage for fossil fuel energy production is disclosed.

In embodiments, a system for data collection, using a computer vision system, in an industrial environment having extended onboard statistical capabilities for continuous monitoring for fossil fuel energy production is disclosed.

In embodiments, a system for data collection, using a computer vision system, in an industrial environment having the use of ambient, local and vibration noise for prediction for fossil fuel energy production is disclosed.

In embodiments, a system for data collection, using a computer vision system, in an industrial environment having smart route changes route based on incoming data or alarms enable simultaneous dynamic data for analysis or correlation for fossil fuel energy production is disclosed.

In embodiments, a system for data collection, using a computer vision system, in an industrial environment having smart ODS and transfer functions for fossil fuel energy production is disclosed.

In embodiments, a system for data collection, using a computer vision system, in an industrial environment having hierarchical multiplexer for fossil fuel energy production is disclosed.

In embodiments, a system for data collection, using a computer vision system, in an industrial environment having identification sensor overload for fossil fuel energy production is disclosed.

In embodiments, a system for data collection, using a computer vision system, in an industrial environment having RF identification and an inclinometer for fossil fuel energy production is disclosed.

In embodiments, a system for data collection, using a computer vision system, in an industrial environment having continuous ultrasonic monitoring for fossil fuel energy production is disclosed.

In embodiments, a system for data collection, using a computer vision system, in an industrial environment having cloud-based, machine pattern recognition based on fusion of remote, analog industrial sensors for fossil fuel energy production is disclosed.

In embodiments, a system for data collection, using a computer vision system, in an industrial environment having cloud-based, machine pattern analysis of state information from multiple analog industrial sensors to provide anticipated state information for an industrial system for fossil fuel energy production is disclosed.

In embodiments, a system for data collection, using a computer vision system, in an industrial environment having cloud-based policy automation engine for IoT, with creation, deployment and management of IoT devices for fossil fuel energy production is disclosed.

In embodiments, a system for data collection, using a computer vision system, in an industrial environment having on-device sensor fusion and data storage for industrial IoT devices for fossil fuel energy production is disclosed.

In embodiments, a system for data collection, using a computer vision system, in an industrial environment having a self-organizing data marketplace for industrial IoT data for fossil fuel energy production is disclosed.

In embodiments, a system for data collection, using a computer vision system, in an industrial environment having self-organization of data pools based on utilization and/or yield metrics for fossil fuel energy production is disclosed.

In embodiments, a system for data collection, using a computer vision system, in an industrial environment having training AI models based on industry-specific feedback for fossil fuel energy production is disclosed.

In embodiments, a system for data collection, using a computer vision system, in an industrial environment having a self-organized swarm of industrial data collectors for fossil fuel energy production is disclosed.

In embodiments, a system for data collection, using a computer vision system, in an industrial environment having an IoT distributed ledger for fossil fuel energy production is disclosed.

In embodiments, a system for data collection, using a computer vision system, in an industrial environment having a self-organizing collector for fossil fuel energy production is disclosed.

In embodiments, a system for data collection, using a computer vision system, in an industrial environment having a network-sensitive collector for fossil fuel energy production is disclosed.

In embodiments, a system for data collection, using a computer vision system, in an industrial environment having a remotely organized collector for fossil fuel energy production is disclosed.

In embodiments, a system for data collection, using a computer vision system, in an industrial environment having a self-organizing storage for a multi-sensor data collector for fossil fuel energy production is disclosed.

In embodiments, a system for data collection, using a computer vision system, in an industrial environment having a self-organizing network coding for multi-sensor data network for fossil fuel energy production is disclosed.

In embodiments, a system for data collection, using a computer vision system, in an industrial environment having a wearable haptic user interface for an industrial sensor data collector, with vibration, heat, electrical and/or sound outputs for fossil fuel energy production is disclosed.

In embodiments, a system for data collection, using a computer vision system, in an industrial environment having heat maps displaying collection data for AR/VR for fossil fuel energy production is disclosed.

In embodiments, a system for data collection, using a computer vision system, in an industrial environment having automatically tuned AR/VR visualization of data collected by a data collector for fossil fuel energy production is disclosed.

In embodiments, a system for data collection, using a computer vision system, in an industrial environment having an IoT platform for fossil fuel energy production is disclosed.

In embodiments, a system for data collection, using a computer vision system, in an industrial environment having an IoT data adapter for receiving data inputs and establishing a connection with one or more available IoT cloud platforms to publish the data for fossil fuel energy production is disclosed.

In embodiments, a system for data collection, using a computer vision system, in an industrial environment having a condition detector for detecting conditions related to connect attempts made by the IoT data adapter to one or more IoT cloud platforms for fossil fuel energy production is disclosed.

In embodiments, a system for data collection, using a computer vision system, in an industrial environment having an IoT data adapter with an adaptation engine for fossil fuel energy production is disclosed.

In embodiments, a system for data collection, using a computer vision system, in an industrial environment having the use of machine learning to prepare a data packet or stream for fossil fuel energy production is disclosed.

In embodiments, a system for data collection, using a computer vision system, in an industrial environment having a data marketplace that provides a pool of available cloud networking platforms for fossil fuel energy production is disclosed.

In embodiments, a system for data collection, using a computer vision system, in an industrial environment having a messaging utility that provides a cloud platform user interface with a message indicating the availability of a new data source and data source integration and usage instructions for fossil fuel energy production is disclosed.

In embodiments, a system for data communication, using a computer vision system, between nodes having the ability to maintain a first and second transmission limit based on received rate of arrival and success of delivery feedback messages, and limiting transmission of messages based on the transmission limits for fossil fuel energy production is disclosed.

In embodiments, a system for data communication, using a computer vision system, between nodes having the ability to limit transmission of further messages not yet acknowledged as successfully delivered according to the window size for fossil fuel energy production is disclosed.

In embodiments, a system for data communication, using a computer vision system, between nodes having the ability to maintain an estimate of a rate of loss events and use it to adjust the rate of redundancy messages for fossil fuel energy production is disclosed.

In embodiments, a system for data communication, using a computer vision system, between nodes having an estimated rate of loss events where the error correction code used to determine redundancy messages chosen is based on the estimated rate of loss events for fossil fuel energy production is disclosed.

In embodiments, a system for data communication, using a computer vision system, between nodes having the ability to apply forward error correction based on messages received describing channel characteristics for fossil fuel energy production is disclosed.

In embodiments, a system for data communication, using a computer vision system, between nodes having the ability to maintain/set timers based on occurrences of delivery order events and delaying transmission of feedback messages using timers for fossil fuel energy production is disclosed.

In embodiments, a system for data communication, using a computer vision system, between nodes having the ability to maintain/set timers based on occurrences of delivery order events and delaying modification of congestion window size based on timers for fossil fuel energy production is disclosed.

In embodiments, a system for data communication, using a computer vision system, between nodes having the ability to maintain/set timers based on occurrences of delivery order events, delaying modification of congestion window size based on timers, and cancelling modification of congestion window size when receiving a feedback message indicating successful delivery for fossil fuel energy production is disclosed.

In embodiments, a system for data communication, using a computer vision system, between nodes having the ability to configure a new connection using maintained data characterizing a current/previous connection for fossil fuel energy production is disclosed.

In embodiments, a system for data communication, using a computer vision system, between nodes having the ability to configure a new connection using maintained data characterizing an error rate of a current/previous connection for fossil fuel energy production is disclosed.

In embodiments, a system for data communication, using a computer vision system, between nodes having the ability to configure a new connection using maintained data characterizing a timing variability of a current/previous connection for fossil fuel energy production is disclosed.

In embodiments, a system for data communication, using a computer vision system, between nodes having the ability to configure a new connection using maintained data characterizing bandwidth of a current/previous connection for fossil fuel energy production is disclosed.

In embodiments, a system for data communication, using a computer vision system, between nodes having the ability to configure a new connection using maintained data characterizing round trip time of a current/previous connection for fossil fuel energy production is disclosed.

In embodiments, a system for data communication, using a computer vision system, between nodes having the ability to configure a new connection using maintained data characterizing communication control parameters of a current/previous connection for fossil fuel energy production is disclosed.

**In** embodiments, a system for data communication, using a computer vision system, between nodes having the ability to configure new connection using maintained data characterizing forward error correction parameters of a current/previous connection for fossil fuel energy production is disclosed.

**In** embodiments, a system for data communication, using a computer vision system, between nodes having a data store for maintaining data characterizing one or more current or previous data communication connections and a connection initiation module for initiating new data communication connections based on maintained data for fossil fuel energy production is disclosed.

In embodiments, a system for data communication, using a computer vision system, between nodes having the ability to transmit a first subset of data messages over a lower latency data path and a second subset of messages over a higher latency data path for fossil fuel energy production is disclosed.

In embodiments, a system for data communication, using a computer vision system, between nodes having the ability to transmit a first subset of data messages that are time critical over a lower latency data path and a second subset of messages over a higher latency data path for fossil fuel energy production is disclosed.

In embodiments, a system for data communication, using a computer vision system, between nodes having the ability to transmit a first initial subset of data messages over a lower latency data path and a second subset of messages that are subsequently available over a higher latency data path for fossil fuel energy production is disclosed.

In embodiments, a system for data communication, using a computer vision system, between nodes having the ability to transmit a first subset of acknowledgment messages over a lower latency data path and a second subset of data messages over a higher latency data path for fossil fuel energy production is disclosed.

In embodiments, a system for data communication, using a computer vision system, between nodes having the ability to transmit a first subset of supplemental/redundancy data messages over a lower latency data path and a second subset of data messages over a higher latency data path for fossil fuel energy production is disclosed.

In embodiments, a system for data communication, using a computer vision system, between nodes having a degree of redundancy associated with each message that is based on message position in the transmission order for fossil fuel energy production is disclosed.

In embodiments, a system for data communication, using a computer vision system, between nodes having a degree of redundancy associated with each message that increases as the position of the messages is non-decreasing for fossil fuel energy production is disclosed.

In embodiments, a system for data communication, using a computer vision system, between nodes having a degree of redundancy associated with each message that is based on message position in the transmission order and in response to receiving feedback messages for fossil fuel energy production is disclosed.

In embodiments, a system for data communication, using a computer vision system, between nodes having a degree of redundancy associated with each message that is based on message position in the transmission order and in response to receiving feedback messages, and adding or removing redundancy messages from the queue based on the feedback messages for fossil fuel energy production is disclosed.

In embodiments, a system for data communication, using a computer vision system, between nodes having the ability to adjust the number of messages sent over each of multiple different data paths with different communication protocols if it is determined that a data path is altering flow of messages for fossil fuel energy production is disclosed.

In embodiments, a system for data communication, using a computer vision system, between nodes having the ability to adjust the number of messages sent over each of multiple different data paths with different communication protocols if it is determined that a data path is altering flow of messages initial division based on previous communication connections for fossil fuel energy production is disclosed.

In embodiments, a system for data communication, using a computer vision system, between nodes having the ability to modify/add/remove redundancy information associated with encoded data as it travels from node to node via channels based on channel characteristics for fossil fuel energy production is disclosed.

In embodiments, a system for data communication, using a computer vision system, between nodes having the ability to send FEC packets at an estimated rate of loss events (isolated packet loss or burst of consecutive packets) for fossil fuel energy production is disclosed.

In embodiments, a system for data communication, using a computer vision system, between nodes having combined coding, TCP, and pacing of packet transmissions for fossil fuel energy production is disclosed.

In embodiments, a system for data communication, using a computer vision system, between nodes having a forward error correction code construction that interleaves groups of message packets and parity packets and has coding across overlapping groups of message packets for fossil fuel energy production is disclosed.

In embodiments, a system for data communication, using a computer vision system, between nodes having a variant of TCP that combines delay-based backoff with a stable window increase function for fossil fuel energy production is disclosed.

In embodiments, a system for data collection, using a computer vision system, in an industrial environment having the use of an analog cross point switch for collecting variable groups of analog sensor inputs for aerospace is disclosed.

In embodiments, a system for data collection, using a computer vision system, in an industrial environment having up front signal conditioning on a multiplexer for improved signal-to-noise ratio for aerospace is disclosed.

In embodiments, a system for data collection, using a computer vision system, in an industrial environment having multiplexer continuous monitoring alarming features for aerospace is disclosed.

In embodiments, a system for data collection, using a computer vision system, in an industrial environment having the use of distributed CPLD chips with dedicated bus for logic control of multiple MUX and data acquisition sections for aerospace is disclosed.

In embodiments, a system for data collection, using a computer vision system, in an industrial environment having high-amperage input capability using solid state relays and design topology for aerospace is disclosed.

In embodiments, a system for data collection, using a computer vision system, in an industrial environment having power-down ability of at least one of an analog sensor channel and a component board for aerospace is disclosed.

In embodiments, a system for data collection, using a computer vision system, in an industrial environment having unique electrostatic protection for trigger and vibration inputs for aerospace is disclosed.

In embodiments, a system for data collection, using a computer vision system, in an industrial environment having precise voltage reference for A/D zero reference for aerospace is disclosed.

In embodiments, a system for data collection, using a computer vision system, in an industrial environment having a phase-lock loop band-pass tracking filter for obtaining slow-speed RPMs and phase information for aerospace is disclosed.

In embodiments, a system for data collection, using a computer vision system, in an industrial environment having digital derivation of phase relative to input and trigger channels using on-board timers for aerospace is disclosed.

In embodiments, a system for data collection, using a computer vision system, in an industrial environment having a peak-detector for auto-scaling that is routed into a separate analog-to-digital converter for peak detection for aerospace is disclosed.

In embodiments, a system for data collection, using a computer vision system, in an industrial environment having routing of a trigger channel that is either raw or buffered into other analog channels for aerospace is disclosed.

In embodiments, a system for data collection, using a computer vision system, in an industrial environment having the use of higher input oversampling for delta-sigma A/D for lower sampling rate outputs to minimize AA filter requirements for aerospace is disclosed.

In embodiments, a system for data collection, using a computer vision system, in an industrial environment having the use of a CPLD as a clock-divider for a delta-sigma analog-to-digital converter to achieve lower sampling rates without the need for digital resampling for aerospace is disclosed.

In embodiments, a system for data collection, using a computer vision system, in an industrial environment having long blocks of data at a high-sampling rate as opposed to multiple sets of data taken at different sampling rates for aerospace is disclosed.

In embodiments, a system for data collection, using a computer vision system, in an industrial environment having storage of calibration data with maintenance history on-board card set for aerospace is disclosed.

In embodiments, a system for data collection, using a computer vision system, in an industrial environment having a rapid route creation capability using hierarchical templates for aerospace is disclosed.

In embodiments, a system for data collection, using a computer vision system, in an industrial environment having intelligent management of data collection bands for aerospace is disclosed.

In embodiments, a system for data collection, using a computer vision system, in an industrial environment having a neural net expert system using intelligent management of data collection bands for aerospace is disclosed.

In embodiments, a system for data collection, using a computer vision system, in an industrial environment having use of a database hierarchy in sensor data analysis for aerospace is disclosed.

In embodiments, a system for data collection, using a computer vision system, in an industrial environment having an expert system GUI graphical approach to defining intelligent data collection bands and diagnoses for the expert system for aerospace is disclosed.

In embodiments, a system for data collection, using a computer vision system, in an industrial environment having a graphical approach for back-calculation definition for aerospace is disclosed.

In embodiments, a system for data collection, using a computer vision system, in an industrial environment having proposed bearing analysis methods for aerospace is disclosed.

In embodiments, a system for data collection, using a computer vision system, in an industrial environment having torsional vibration detection/analysis utilizing transitory signal analysis for aerospace is disclosed.

In embodiments, a system for data collection, using a computer vision system, in an industrial environment having improved integration using both analog and digital methods for aerospace is disclosed.

In embodiments, a system for data collection, using a computer vision system, in an industrial environment having adaptive scheduling techniques for continuous monitoring of analog data in a local environment for aerospace is disclosed.

In embodiments, a system for data collection, using a computer vision system, in an industrial environment having data acquisition parking features for aerospace is disclosed.

In embodiments, a system for data collection, using a computer vision system, in an industrial environment having a self-sufficient data acquisition box for aerospace is disclosed.

In embodiments, a system for data collection, using a computer vision system, in an industrial environment having SD card storage for aerospace is disclosed.

In embodiments, a system for data collection, using a computer vision system, in an industrial environment having extended onboard statistical capabilities for continuous monitoring for aerospace is disclosed.

In embodiments, a system for data collection, using a computer vision system, in an industrial environment having the use of ambient, local and vibration noise for prediction for aerospace is disclosed.

In embodiments, a system for data collection, using a computer vision system, in an industrial environment having smart route changes route based on incoming data or alarms enable simultaneous dynamic data for analysis or correlation for aerospace is disclosed.

In embodiments, a system for data collection, using a computer vision system, in an industrial environment having smart ODS and transfer functions for aerospace is disclosed.

In embodiments, a system for data collection, using a computer vision system, in an industrial environment having hierarchical multiplexer for aerospace is disclosed.

In embodiments, a system for data collection, using a computer vision system, in an industrial environment having identification sensor overload for aerospace is disclosed.

In embodiments, a system for data collection, using a computer vision system, in an industrial environment having RF identification and an inclinometer for aerospace is disclosed.

In embodiments, a system for data collection, using a computer vision system, in an industrial environment having continuous ultrasonic monitoring for aerospace is disclosed.

In embodiments, a system for data collection, using a computer vision system, in an industrial environment having cloud-based, machine pattern recognition based on fusion of remote, analog industrial sensors for aerospace is disclosed.

In embodiments, a system for data collection, using a computer vision system, in an industrial environment having cloud-based, machine pattern analysis of state information from multiple analog industrial sensors to provide anticipated state information for an industrial system for aerospace is disclosed.

In embodiments, a system for data collection, using a computer vision system, in an industrial environment having cloud-based policy automation engine for IoT, with creation, deployment and management of IoT devices for aerospace is disclosed.

In embodiments, a system for data collection, using a computer vision system, in an industrial environment having on-device sensor fusion and data storage for industrial IoT devices for aerospace is disclosed.

In embodiments, a system for data collection, using a computer vision system, in an industrial environment having a self-organizing data marketplace for industrial IoT data for aerospace is disclosed.

In embodiments, a system for data collection, using a computer vision system, in an industrial environment having self-organization of data pools based on utilization and/or yield metrics for aerospace is disclosed.

In embodiments, a system for data collection, using a computer vision system, in an industrial environment having training AI models based on industry-specific feedback for aerospace is disclosed.

In embodiments, a system for data collection, using a computer vision system, in an industrial environment having a self-organized swarm of industrial data collectors for aerospace is disclosed.

In embodiments, a system for data collection, using a computer vision system, in an industrial environment having an IoT distributed ledger for aerospace is disclosed.

In embodiments, a system for data collection, using a computer vision system, in an industrial environment having a self-organizing collector for aerospace is disclosed.

In embodiments, a system for data collection, using a computer vision system, in an industrial environment having a network-sensitive collector for aerospace is disclosed.

In embodiments, a system for data collection, using a computer vision system, in an industrial environment having a remotely organized collector for aerospace is disclosed.

In embodiments, a system for data collection, using a computer vision system, in an industrial environment having a self-organizing storage for a multi-sensor data collector for aerospace is disclosed.

In embodiments, a system for data collection, using a computer vision system, in an industrial environment having a self-organizing network coding for multi-sensor data network for aerospace is disclosed.

In embodiments, a system for data collection, using a computer vision system, in an industrial environment having a wearable haptic user interface for an industrial sensor data collector, with vibration, heat, electrical and/or sound outputs for aerospace is disclosed.

In embodiments, a system for data collection, using a computer vision system, in an industrial environment having heat maps displaying collection data for AR/VR for aerospace is disclosed.

In embodiments, a system for data collection, using a computer vision system, in an industrial environment having automatically tuned AR/VR visualization of data collected by a data collector for aerospace is disclosed.

In embodiments, a system for data collection, using a computer vision system, in an industrial environment having an IoT platform for aerospace is disclosed.

In embodiments, a system for data collection, using a computer vision system, in an industrial environment having an IoT data adapter for receiving data inputs and establishing a connection with one or more available IoT cloud platforms to publish the data for aerospace is disclosed.

In embodiments, a system for data collection, using a computer vision system, in an industrial environment having a condition detector for detecting conditions related to connect attempts made by the IoT data adapter to one or more IoT cloud platforms for aerospace is disclosed.

In embodiments, a system for data collection, using a computer vision system, in an industrial environment having an IoT data adapter with an adaptation engine for aerospace is disclosed.

In embodiments, a system for data collection, using a computer vision system, in an industrial environment having the use of machine learning to prepare a data packet or stream for aerospace is disclosed.

In embodiments, a system for data collection, using a computer vision system, in an industrial environment having a data marketplace that provides a pool of available cloud networking platforms for aerospace is disclosed.

In embodiments, a system for data collection, using a computer vision system, in an industrial environment having a messaging utility that provides a cloud platform user interface with a message indicating the availability of a new data source and data source integration and usage instructions for aerospace is disclosed.

In embodiments, a system for data communication, using a computer vision system, between nodes having the ability to maintain a first and second transmission limit based on received rate of arrival and success of delivery feedback messages, and limiting transmission of messages based on the transmission limits for aerospace is disclosed.

In embodiments, a system for data communication, using a computer vision system, between nodes having the ability to limit transmission of further messages not yet acknowledged as successfully delivered according to the window size for aerospace is disclosed.

In embodiments, a system for data communication, using a computer vision system, between nodes having the ability to maintain an estimate of a rate of loss events and use it to adjust the rate of redundancy messages for aerospace is disclosed.

In embodiments, a system for data communication, using a computer vision system, between nodes having an estimated rate of loss events where the error correction code used to determine redundancy messages chosen is based on the estimated rate of loss events for aerospace is disclosed.

In embodiments, a system for data communication, using a computer vision system, between nodes having the ability to apply forward error correction based on messages received describing channel characteristics for aerospace is disclosed.

In embodiments, a system for data communication, using a computer vision system, between nodes having the ability to maintain/set timers based on occurrences of delivery order events and delaying transmission of feedback messages using timers for aerospace is disclosed.

In embodiments, a system for data communication, using a computer vision system, between nodes having the ability to maintain/set timers based on occurrences of delivery order events and delaying modification of congestion window size based on timers for aerospace is disclosed.

In embodiments, a system for data communication, using a computer vision system, between nodes having the ability to maintain/set timers based on occurrences of delivery order events, delaying modification of congestion window size based on timers, and cancelling modification of congestion window size when receiving a feedback message indicating successful delivery for aerospace is disclosed.

In embodiments, a system for data communication, using a computer vision system, between nodes having the ability to configure a new connection using maintained data characterizing a current/previous connection for aerospace is disclosed.

In embodiments, a system for data communication, using a computer vision system, between nodes having the ability to configure a new connection using maintained data characterizing an error rate of a current/previous connection for aerospace is disclosed.

In embodiments, a system for data communication, using a computer vision system, between nodes having the ability to configure a new connection using maintained data characterizing a timing variability of a current/previous connection for aerospace is disclosed.

In embodiments, a system for data communication, using a computer vision system, between nodes having the ability to configure a new connection using maintained data characterizing bandwidth of a current/previous connection for aerospace is disclosed.

In embodiments, a system for data communication, using a computer vision system, between nodes having the ability to configure a new connection using maintained data characterizing round trip time of a current/previous connection for aerospace is disclosed.

In embodiments, a system for data communication, using a computer vision system, between nodes having the ability to configure a new connection using maintained data characterizing communication control parameters of a current/previous connection for aerospace is disclosed.

In embodiments, a system for data communication, using a computer vision system, between nodes having the ability to configure new connection using maintained data characterizing forward error correction parameters of a current/previous connection for aerospace is disclosed.

In embodiments, a system for data communication, using a computer vision system, between nodes having a data store for maintaining data characterizing one or more current or previous data communication connections and a connection initiation module for initiating new data communication connections based on maintained data for aerospace is disclosed.

In embodiments, a system for data communication, using a computer vision system, between nodes having the ability to transmit a first subset of data messages over a lower latency data path and a second subset of messages over a higher latency data path for aerospace is disclosed.

In embodiments, a system for data communication, using a computer vision system, between nodes having the ability to transmit a first subset of data messages that are time critical over a lower latency data path and a second subset of messages over a higher latency data path for aerospace is disclosed.

In embodiments, a system for data communication, using a computer vision system, between nodes having the ability to transmit a first initial subset of data messages over a lower latency data path and a second subset of messages that are subsequently available over a higher latency data path for aerospace is disclosed.

In embodiments, a system for data communication, using a computer vision system, between nodes having the ability to transmit a first subset of acknowledgment messages over a lower latency data path and a second subset of data messages over a higher latency data path for aerospace is disclosed.

In embodiments, a system for data communication, using a computer vision system, between nodes having the ability to transmit a first subset of supplemental/redundancy data messages over a lower latency data path and a second subset of data messages over a higher latency data path for aerospace is disclosed.

In embodiments, a system for data communication, using a computer vision system, between nodes having a degree of redundancy associated with each message that is based on message position in the transmission order for aerospace is disclosed.

In embodiments, a system for data communication, using a computer vision system, between nodes having a degree of redundancy associated with each message that increases as the position of the messages is non-decreasing for aerospace is disclosed.

In embodiments, a system for data communication, using a computer vision system, between nodes having a degree of redundancy associated with each message that is based on message position in the transmission order and in response to receiving feedback messages for aerospace is disclosed.

In embodiments, a system for data communication, using a computer vision system, between nodes having a degree of redundancy associated with each message that is based on message position in the transmission order and in response to receiving feedback messages, and adding or removing redundancy messages from the queue based on the feedback messages for aerospace is disclosed.

In embodiments, a system for data communication, using a computer vision system, between nodes having the ability to adjust the number of messages sent over each of multiple different data paths with different communication protocols if it is determined that a data path is altering flow of messages for aerospace is disclosed.

In embodiments, a system for data communication, using a computer vision system, between nodes having the ability to adjust the number of messages sent over each of multiple different data paths with different communication protocols if it is determined that a data path is altering flow of messages initial division based on previous communication connections for aerospace is disclosed.

In embodiments, a system for data communication, using a computer vision system, between nodes having the ability to modify/add/remove redundancy information associated with encoded data as it travels from node to node via channels based on channel characteristics for aerospace is disclosed.

In embodiments, a system for data communication, using a computer vision system, between nodes having the ability to send FEC packets at an estimated rate of loss events (isolated packet loss or burst of consecutive packets) for aerospace is disclosed.

In embodiments, a system for data communication, using a computer vision system, between nodes having combined coding, TCP, and pacing of packet transmissions for aerospace is disclosed.

In embodiments, a system for data communication, using a computer vision system, between nodes having a forward error correction code construction that interleaves groups of message packets and parity packets and has coding across overlapping groups of message packets for aerospace is disclosed.

In embodiments, a system for data communication, using a computer vision system, between nodes having a variant of TCP that combines delay-based backoff with a stable window increase function for aerospace is disclosed.

In embodiments, a system for data collection, using a computer vision system, in an industrial environment having the use of an analog cross point switch for collecting variable groups of analog sensor inputs for mining is disclosed.

In embodiments, a system for data collection, using a computer vision system, in an industrial environment having up front signal conditioning on a multiplexer for improved signal-to-noise ratio for mining is disclosed.

In embodiments, a system for data collection, using a computer vision system, in an industrial environment having multiplexer continuous monitoring alarming features for mining is disclosed.

In embodiments, a system for data collection, using a computer vision system, in an industrial environment having the use of distributed CPLD chips with dedicated bus for logic control of multiple MUX and data acquisition sections for mining is disclosed.

In embodiments, a system for data collection, using a computer vision system, in an industrial environment having high-amperage input capability using solid state relays and design topology for mining is disclosed.

In embodiments, a system for data collection, using a computer vision system, in an industrial environment having power-down ability of at least one of an analog sensor channel and a component board for mining is disclosed.

In embodiments, a system for data collection, using a computer vision system, in an industrial environment having unique electrostatic protection for trigger and vibration inputs for mining is disclosed.

In embodiments, a system for data collection, using a computer vision system, in an industrial environment having precise voltage reference for A/D zero reference for mining is disclosed.

In embodiments, a system for data collection, using a computer vision system, in an industrial environment having a phase-lock loop band-pass tracking filter for obtaining slow-speed RPMs and phase information for mining is disclosed.

In embodiments, a system for data collection, using a computer vision system, in an industrial environment having digital derivation of phase relative to input and trigger channels using on-board timers for mining is disclosed.

In embodiments, a system for data collection, using a computer vision system, in an industrial environment having a peak-detector for auto-scaling that is routed into a separate analog-to-digital converter for peak detection for mining is disclosed.

In embodiments, a system for data collection, using a computer vision system, in an industrial environment having routing of a trigger channel that is either raw or buffered into other analog channels for mining is disclosed.

In embodiments, a system for data collection, using a computer vision system, in an industrial environment having the use of higher input oversampling for delta-sigma A/D for lower sampling rate outputs to minimize AA filter requirements for mining is disclosed.

In embodiments, a system for data collection, using a computer vision system, in an industrial environment having the use of a CPLD as a clock-divider for a delta-sigma analog-to-digital converter to achieve lower sampling rates without the need for digital resampling for mining is disclosed.

In embodiments, a system for data collection, using a computer vision system, in an industrial environment having long blocks of data at a high-sampling rate as opposed to multiple sets of data taken at different sampling rates for mining is disclosed.

In embodiments, a system for data collection, using a computer vision system, in an industrial environment having storage of calibration data with maintenance history on-board card set for mining is disclosed.

In embodiments, a system for data collection, using a computer vision system, in an industrial environment having a rapid route creation capability using hierarchical templates for mining is disclosed.

In embodiments, a system for data collection, using a computer vision system, in an industrial environment having intelligent management of data collection bands for mining is disclosed.

In embodiments, a system for data collection, using a computer vision system, in an industrial environment having a neural net expert system using intelligent management of data collection bands for mining is disclosed.

In embodiments, a system for data collection, using a computer vision system, in an industrial environment having use of a database hierarchy in sensor data analysis for mining is disclosed.

In embodiments, a system for data collection, using a computer vision system, in an industrial environment having an expert system GUI graphical approach to defining intelligent data collection bands and diagnoses for the expert system for mining is disclosed.

In embodiments, a system for data collection, using a computer vision system, in an industrial environment having a graphical approach for back-calculation definition for mining is disclosed.

In embodiments, a system for data collection, using a computer vision system, in an industrial environment having proposed bearing analysis methods for mining is disclosed.

In embodiments, a system for data collection, using a computer vision system, in an industrial environment having torsional vibration detection/analysis utilizing transitory signal analysis for mining is disclosed.

In embodiments, a system for data collection, using a computer vision system, in an industrial environment having improved integration using both analog and digital methods for mining is disclosed.

In embodiments, a system for data collection, using a computer vision system, in an industrial environment having adaptive scheduling techniques for continuous monitoring of analog data in a local environment for mining is disclosed.

In embodiments, a system for data collection, using a computer vision system, in an industrial environment having data acquisition parking features for mining is disclosed.

In embodiments, a system for data collection, using a computer vision system, in an industrial environment having a self-sufficient data acquisition box for mining is disclosed.

In embodiments, a system for data collection, using a computer vision system, in an industrial environment having SD card storage for mining is disclosed.

In embodiments, a system for data collection, using a computer vision system, in an industrial environment having extended onboard statistical capabilities for continuous monitoring for mining is disclosed.

In embodiments, a system for data collection, using a computer vision system, in an industrial environment having the use of ambient, local and vibration noise for prediction for mining is disclosed.

In embodiments, a system for data collection, using a computer vision system, in an industrial environment having smart route changes route based on incoming data or alarms enable simultaneous dynamic data for analysis or correlation for mining is disclosed.

In embodiments, a system for data collection, using a computer vision system, in an industrial environment having smart ODS and transfer functions for mining is disclosed.

In embodiments, a system for data collection, using a computer vision system, in an industrial environment having hierarchical multiplexer for mining is disclosed.

In embodiments, a system for data collection, using a computer vision system, in an industrial environment having identification sensor overload for mining is disclosed.

In embodiments, a system for data collection, using a computer vision system, in an industrial environment having RF identification and an inclinometer for mining is disclosed.

In embodiments, a system for data collection, using a computer vision system, in an industrial environment having continuous ultrasonic monitoring for mining is disclosed.

In embodiments, a system for data collection, using a computer vision system, in an industrial environment having cloud-based, machine pattern recognition based on fusion of remote, analog industrial sensors for mining is disclosed.

In embodiments, a system for data collection, using a computer vision system, in an industrial environment having cloud-based, machine pattern analysis of state information from multiple analog industrial sensors to provide anticipated state information for an industrial system for mining is disclosed.

In embodiments, a system for data collection, using a computer vision system, in an industrial environment having cloud-based policy automation engine for IoT, with creation, deployment and management of IoT devices for mining is disclosed.

In embodiments, a system for data collection, using a computer vision system, in an industrial environment having on-device sensor fusion and data storage for industrial IoT devices for mining is disclosed.

In embodiments, a system for data collection, using a computer vision system, in an industrial environment having a self-organizing data marketplace for industrial IoT data for mining is disclosed.

In embodiments, a system for data collection, using a computer vision system, in an industrial environment having self-organization of data pools based on utilization and/or yield metrics for mining is disclosed.

In embodiments, a system for data collection, using a computer vision system, in an industrial environment having training AI models based on industry-specific feedback for mining is disclosed.

In embodiments, a system for data collection, using a computer vision system, in an industrial environment having a self-organized swarm of industrial data collectors for mining is disclosed.

In embodiments, a system for data collection, using a computer vision system, in an industrial environment having an IoT distributed ledger for mining is disclosed.

In embodiments, a system for data collection, using a computer vision system, in an industrial environment having a self-organizing collector for mining is disclosed.

In embodiments, a system for data collection, using a computer vision system, in an industrial environment having a network-sensitive collector for mining is disclosed.

In embodiments, a system for data collection, using a computer vision system, in an industrial environment having a remotely organized collector for mining is disclosed.

In embodiments, a system for data collection, using a computer vision system, in an industrial environment having a self-organizing storage for a multi-sensor data collector for mining is disclosed.

In embodiments, a system for data collection, using a computer vision system, in an industrial environment having a self-organizing network coding for multi-sensor data network for mining is disclosed.

In embodiments, a system for data collection, using a computer vision system, in an industrial environment having a wearable haptic user interface for an industrial sensor data collector, with vibration, heat, electrical and/or sound outputs for mining is disclosed.

In embodiments, a system for data collection, using a computer vision system, in an industrial environment having heat maps displaying collection data for AR/VR for mining is disclosed.

In embodiments, a system for data collection, using a computer vision system, in an industrial environment having automatically tuned AR/VR visualization of data collected by a data collector for mining is disclosed.

In embodiments, a system for data collection, using a computer vision system, in an industrial environment having an IoT platform for mining is disclosed.

In embodiments, a system for data collection, using a computer vision system, in an industrial environment having an IoT data adapter for receiving data inputs and establishing a connection with one or more available IoT cloud platforms to publish the data for mining is disclosed.

In embodiments, a system for data collection, using a computer vision system, in an industrial environment having a condition detector for detecting conditions related to connect attempts made by the IoT data adapter to one or more IoT cloud platforms for mining is disclosed.

In embodiments, a system for data collection, using a computer vision system, in an industrial environment having an IoT data adapter with an adaptation engine for mining is disclosed.

In embodiments, a system for data collection, using a computer vision system, in an industrial environment having the use of machine learning to prepare a data packet or stream for mining is disclosed.

In embodiments, a system for data collection, using a computer vision system, in an industrial environment having a data marketplace that provides a pool of available cloud networking platforms for mining is disclosed.

In embodiments, a system for data collection, using a computer vision system, in an industrial environment having a messaging utility that provides a cloud platform user interface with a message indicating the availability of a new data source and data source integration and usage instructions for mining is disclosed.

In embodiments, a system for data communication, using a computer vision system, between nodes having the ability to maintain a first and second transmission limit based on received rate of arrival and success of delivery feedback messages, and limiting transmission of messages based on the transmission limits for mining is disclosed.

In embodiments, a system for data communication, using a computer vision system, between nodes having the ability to limit transmission of further messages not yet acknowledged as successfully delivered according to the window size for mining is disclosed.

In embodiments, a system for data communication, using a computer vision system, between nodes having the ability to maintain an estimate of a rate of loss events and use it to adjust the rate of redundancy messages for mining is disclosed.

In embodiments, a system for data communication, using a computer vision system, between nodes having an estimated rate of loss events where the error correction code used to determine redundancy messages chosen is based on the estimated rate of loss events for mining is disclosed.

In embodiments, a system for data communication, using a computer vision system, between nodes having the ability to apply forward error correction based on messages received describing channel characteristics for mining is disclosed.

In embodiments, a system for data communication, using a computer vision system, between nodes having the ability to maintain/set timers based on occurrences of delivery order events and delaying transmission of feedback messages using timers for mining is disclosed.

In embodiments, a system for data communication, using a computer vision system, between nodes having the ability to maintain/set timers based on occurrences of delivery order events and delaying modification of congestion window size based on timers for mining is disclosed.

In embodiments, a system for data communication, using a computer vision system, between nodes having the ability to maintain/set timers based on occurrences of delivery order events, delaying modification of congestion window size based on timers, and cancelling modification of congestion window size when receiving a feedback message indicating successful delivery for mining is disclosed.

In embodiments, a system for data communication, using a computer vision system, between nodes having the ability to configure a new connection using maintained data characterizing a current/previous connection for mining is disclosed.

In embodiments, a system for data communication, using a computer vision system, between nodes having the ability to configure a new connection using maintained data characterizing an error rate of a current/previous connection for mining is disclosed.

In embodiments, a system for data communication, using a computer vision system, between nodes having the ability to configure a new connection using maintained data characterizing a timing variability of a current/previous connection for mining is disclosed.

In embodiments, a system for data communication, using a computer vision system, between nodes having the ability to configure a new connection using maintained data characterizing bandwidth of a current/previous connection for mining is disclosed.

In embodiments, a system for data communication, using a computer vision system, between nodes having the ability to configure a new connection using maintained data characterizing round trip time of a current/previous connection for mining is disclosed.

In embodiments, a system for data communication, using a computer vision system, between nodes having the ability to configure a new connection using maintained data characterizing communication control parameters of a current/previous connection for mining is disclosed.

In embodiments, a system for data communication, using a computer vision system, between nodes having the ability to configure new connection using maintained data characterizing forward error correction parameters of a current/previous connection for mining is disclosed.

In embodiments, a system for data communication, using a computer vision system, between nodes having a data store for maintaining data characterizing one or more current or previous data communication connections and a connection initiation module for initiating new data communication connections based on maintained data for mining is disclosed.

In embodiments, a system for data communication, using a computer vision system, between nodes having the ability to transmit a first subset of data messages over a lower latency data path and a second subset of messages over a higher latency data path for mining is disclosed.

In embodiments, a system for data communication, using a computer vision system, between nodes having the ability to transmit a first subset of data messages that are time critical over a lower latency data path and a second subset of messages over a higher latency data path for mining is disclosed.

In embodiments, a system for data communication, using a computer vision system, between nodes having the ability to transmit a first initial subset of data messages over a lower latency data path and a second subset of messages that are subsequently available over a higher latency data path for mining is disclosed.

In embodiments, a system for data communication, using a computer vision system, between nodes having the ability to transmit a first subset of acknowledgment messages over a lower latency data path and a second subset of data messages over a higher latency data path for mining is disclosed.

In embodiments, a system for data communication, using a computer vision system, between nodes having the ability to transmit a first subset of supplemental/redundancy data messages over a lower latency data path and a second subset of data messages over a higher latency data path for mining is disclosed.

In embodiments, a system for data communication, using a computer vision system, between nodes having a degree of redundancy associated with each message that is based on message position in the transmission order for mining is disclosed.

In embodiments, a system for data communication, using a computer vision system, between nodes having a degree of redundancy associated with each message that increases as the position of the messages is non-decreasing for mining is disclosed.

In embodiments, a system for data communication, using a computer vision system, between nodes having a degree of redundancy associated with each message that is based on message position in the transmission order and in response to receiving feedback messages for mining is disclosed.

In embodiments, a system for data communication, using a computer vision system, between nodes having a degree of redundancy associated with each message that is based on message position in the transmission order and in response to receiving feedback messages, and adding or removing redundancy messages from the queue based on the feedback messages for mining is disclosed.

In embodiments, a system for data communication, using a computer vision system, between nodes having the ability to adjust the number of messages sent over each of multiple different data paths with different communication protocols if it is determined that a data path is altering flow of messages for mining is disclosed.

In embodiments, a system for data communication, using a computer vision system, between nodes having the ability to adjust the number of messages sent over each of multiple different data paths with different communication protocols if it is determined that a data path is altering flow of messages initial division based on previous communication connections for mining is disclosed.

In embodiments, a system for data communication, using a computer vision system, between nodes having the ability to modify/add/remove redundancy information associated with encoded data as it travels from node to node via channels based on channel characteristics for mining is disclosed.

In embodiments, a system for data communication, using a computer vision system, between nodes having the ability to send FEC packets at an estimated rate of loss events (isolated packet loss or burst of consecutive packets) for mining is disclosed.

In embodiments, a system for data communication, using a computer vision system, between nodes having combined coding, TCP, and pacing of packet transmissions for mining is disclosed.

In embodiments, a system for data communication, using a computer vision system, between nodes having a forward error correction code construction that interleaves groups of message packets and parity packets and has coding across overlapping groups of message packets for mining is disclosed.

In embodiments, a system for data communication, using a computer vision system, between nodes having a variant of TCP that combines delay-based backoff with a stable window increase function for mining is disclosed.

In embodiments, a system for data collection, using a computer vision system, in an industrial environment having the use of an analog cross point switch for collecting variable groups of analog sensor inputs for construction is disclosed.

In embodiments, a system for data collection, using a computer vision system, in an industrial environment having up front signal conditioning on a multiplexer for improved signal-to-noise ratio for construction is disclosed.

In embodiments, a system for data collection, using a computer vision system, in an industrial environment having multiplexer continuous monitoring alarming features for construction is disclosed.

In embodiments, a system for data collection, using a computer vision system, in an industrial environment having the use of distributed CPLD chips with dedicated bus for logic control of multiple MUX and data acquisition sections for construction is disclosed.

In embodiments, a system for data collection, using a computer vision system, in an industrial environment having high-amperage input capability using solid state relays and design topology for construction is disclosed.

In embodiments, a system for data collection, using a computer vision system, in an industrial environment having power-down ability of at least one of an analog sensor channel and a component board for construction is disclosed.

In embodiments, a system for data collection, using a computer vision system, in an industrial environment having unique electrostatic protection for trigger and vibration inputs for construction is disclosed.

In embodiments, a system for data collection, using a computer vision system, in an industrial environment having precise voltage reference for A/D zero reference for construction is disclosed.

In embodiments, a system for data collection, using a computer vision system, in an industrial environment having a phase-lock loop band-pass tracking filter for obtaining slow-speed RPMs and phase information for construction is disclosed.

In embodiments, a system for data collection, using a computer vision system, in an industrial environment having digital derivation of phase relative to input and trigger channels using on-board timers for construction is disclosed.

In embodiments, a system for data collection, using a computer vision system, in an industrial environment having a peak-detector for auto-scaling that is routed into a separate analog-to-digital converter for peak detection for construction is disclosed.

In embodiments, a system for data collection, using a computer vision system, in an industrial environment having routing of a trigger channel that is either raw or buffered into other analog channels for construction is disclosed.

In embodiments, a system for data collection, using a computer vision system, in an industrial environment having the use of higher input oversampling for delta-sigma A/D for lower sampling rate outputs to minimize AA filter requirements for construction is disclosed.

In embodiments, a system for data collection, using a computer vision system, in an industrial environment having the use of a CPLD as a clock-divider for a delta-sigma analog-to-digital converter to achieve lower sampling rates without the need for digital resampling for construction is disclosed.

In embodiments, a system for data collection, using a computer vision system, in an industrial environment having long blocks of data at a high-sampling rate as opposed to multiple sets of data taken at different sampling rates for construction is disclosed.

In embodiments, a system for data collection, using a computer vision system, in an industrial environment having storage of calibration data with maintenance history on-board card set for construction is disclosed.

In embodiments, a system for data collection, using a computer vision system, in an industrial environment having a rapid route creation capability using hierarchical templates for construction is disclosed.

In embodiments, a system for data collection, using a computer vision system, in an industrial environment having intelligent management of data collection bands for construction is disclosed.

In embodiments, a system for data collection, using a computer vision system, in an industrial environment having a neural net expert system using intelligent management of data collection bands for construction is disclosed.

In embodiments, a system for data collection, using a computer vision system, in an industrial environment having use of a database hierarchy in sensor data analysis for construction is disclosed.

In embodiments, a system for data collection, using a computer vision system, in an industrial environment having an expert system GUI graphical approach to defining intelligent data collection bands and diagnoses for the expert system for construction is disclosed.

In embodiments, a system for data collection, using a computer vision system, in an industrial environment having a graphical approach for back-calculation definition for construction is disclosed.

In embodiments, a system for data collection, using a computer vision system, in an industrial environment having proposed bearing analysis methods for construction is disclosed.

In embodiments, a system for data collection, using a computer vision system, in an industrial environment having torsional vibration detection/analysis utilizing transitory signal analysis for construction is disclosed.

In embodiments, a system for data collection, using a computer vision system, in an industrial environment having improved integration using both analog and digital methods for construction is disclosed.

In embodiments, a system for data collection, using a computer vision system, in an industrial environment having adaptive scheduling techniques for continuous monitoring of analog data in a local environment for construction is disclosed.

In embodiments, a system for data collection, using a computer vision system, in an industrial environment having data acquisition parking features for construction is disclosed.

In embodiments, a system for data collection, using a computer vision system, in an industrial environment having a self-sufficient data acquisition box for construction is disclosed.

In embodiments, a system for data collection, using a computer vision system, in an industrial environment having SD card storage for construction is disclosed.

In embodiments, a system for data collection, using a computer vision system, in an industrial environment having extended onboard statistical capabilities for continuous monitoring for construction is disclosed.

In embodiments, a system for data collection, using a computer vision system, in an industrial environment having the use of ambient, local and vibration noise for prediction for construction is disclosed.

In embodiments, a system for data collection, using a computer vision system, in an industrial environment having smart route changes route based on incoming data or alarms enable simultaneous dynamic data for analysis or correlation for construction is disclosed.

In embodiments, a system for data collection, using a computer vision system, in an industrial environment having smart ODS and transfer functions for construction is disclosed.

In embodiments, a system for data collection, using a computer vision system, in an industrial environment having hierarchical multiplexer for construction is disclosed.

In embodiments, a system for data collection, using a computer vision system, in an industrial environment having identification sensor overload for construction is disclosed.

In embodiments, a system for data collection, using a computer vision system, in an industrial environment having RF identification and an inclinometer for construction is disclosed.

In embodiments, a system for data collection, using a computer vision system, in an industrial environment having continuous ultrasonic monitoring for construction is disclosed.

In embodiments, a system for data collection, using a computer vision system, in an industrial environment having cloud-based, machine pattern recognition based on fusion of remote, analog industrial sensors for construction is disclosed.

In embodiments, a system for data collection, using a computer vision system, in an industrial environment having cloud-based, machine pattern analysis of state information from multiple analog industrial sensors to provide anticipated state information for an industrial system for construction is disclosed.

In embodiments, a system for data collection, using a computer vision system, in an industrial environment having cloud-based policy automation engine for IoT, with creation, deployment and management of IoT devices for construction is disclosed.

In embodiments, a system for data collection, using a computer vision system, in an industrial environment having on-device sensor fusion and data storage for industrial IoT devices for construction is disclosed.

In embodiments, a system for data collection, using a computer vision system, in an industrial environment having a self-organizing data marketplace for industrial IoT data for construction is disclosed.

In embodiments, a system for data collection, using a computer vision system, in an industrial environment having self-organization of data pools based on utilization and/or yield metrics for construction is disclosed.

In embodiments, a system for data collection, using a computer vision system, in an industrial environment having training AI models based on industry-specific feedback for construction is disclosed.

In embodiments, a system for data collection, using a computer vision system, in an industrial environment having a self-organized swarm of industrial data collectors for construction is disclosed.

In embodiments, a system for data collection, using a computer vision system, in an industrial environment having an IoT distributed ledger for construction is disclosed.

In embodiments, a system for data collection, using a computer vision system, in an industrial environment having a self-organizing collector for construction is disclosed.

In embodiments, a system for data collection, using a computer vision system, in an industrial environment having a network-sensitive collector for construction is disclosed.

In embodiments, a system for data collection, using a computer vision system, in an industrial environment having a remotely organized collector for construction is disclosed.

In embodiments, a system for data collection, using a computer vision system, in an industrial environment having a self-organizing storage for a multi-sensor data collector for construction is disclosed.

In embodiments, a system for data collection, using a computer vision system, in an industrial environment having a self-organizing network coding for multi-sensor data network for construction is disclosed.

In embodiments, a system for data collection, using a computer vision system, in an industrial environment having a wearable haptic user interface for an industrial sensor data collector, with vibration, heat, electrical and/or sound outputs for construction is disclosed.

In embodiments, a system for data collection, using a computer vision system, in an industrial environment having heat maps displaying collection data for AR/VR for construction is disclosed.

In embodiments, a system for data collection, using a computer vision system, in an industrial environment having automatically tuned AR/VR visualization of data collected by a data collector for construction is disclosed.

In embodiments, a system for data collection, using a computer vision system, in an industrial environment having an IoT platform for construction is disclosed.

In embodiments, a system for data collection, using a computer vision system, in an industrial environment having an IoT data adapter for receiving data inputs and establishing a connection with one or more available IoT cloud platforms to publish the data for construction is disclosed.

In embodiments, a system for data collection, using a computer vision system, in an industrial environment having a condition detector for detecting conditions related to connect attempts made by the IoT data adapter to one or more IoT cloud platforms for construction is disclosed.

In embodiments, a system for data collection, using a computer vision system, in an industrial environment having an IoT data adapter with an adaptation engine for construction is disclosed.

In embodiments, a system for data collection, using a computer vision system, in an industrial environment having the use of machine learning to prepare a data packet or stream for construction is disclosed.

In embodiments, a system for data collection, using a computer vision system, in an industrial environment having a data marketplace that provides a pool of available cloud networking platforms for construction is disclosed.

In embodiments, a system for data collection, using a computer vision system, in an industrial environment having a messaging utility that provides a cloud platform user interface with a message indicating the availability of a new data source and data source integration and usage instructions for construction is disclosed.

In embodiments, a system for data communication, using a computer vision system, between nodes having the ability to maintain a first and second transmission limit based on received rate of arrival and success of delivery feedback messages, and limiting transmission of messages based on the transmission limits for construction is disclosed.

In embodiments, a system for data communication, using a computer vision system, between nodes having the ability to limit transmission of further messages not yet acknowledged as successfully delivered according to the window size for construction is disclosed.

In embodiments, a system for data communication, using a computer vision system, between nodes having the ability to maintain an estimate of a rate of loss events and use it to adjust the rate of redundancy messages for construction is disclosed.

In embodiments, a system for data communication, using a computer vision system, between nodes having an estimated rate of loss events where the error correction code used to determine redundancy messages chosen is based on the estimated rate of loss events for construction is disclosed.

In embodiments, a system for data communication, using a computer vision system, between nodes having the ability to apply forward error correction based on messages received describing channel characteristics for construction is disclosed.

In embodiments, a system for data communication, using a computer vision system, between nodes having the ability to maintain/set timers based on occurrences of delivery order events and delaying transmission of feedback messages using timers for construction is disclosed.

In embodiments, a system for data communication, using a computer vision system, between nodes having the ability to maintain/set timers based on occurrences of delivery order events and delaying modification of congestion window size based on timers for construction is disclosed.

In embodiments, a system for data communication, using a computer vision system, between nodes having the ability to maintain/set timers based on occurrences of delivery order events, delaying modification of congestion window size based on timers, and cancelling modification of congestion window size when receiving a feedback message indicating successful delivery for construction is disclosed.

In embodiments, a system for data communication, using a computer vision system, between nodes having the ability to configure a new connection using maintained data characterizing a current/previous connection for construction is disclosed.

In embodiments, a system for data communication, using a computer vision system, between nodes having the ability to configure a new connection using maintained data characterizing an error rate of a current/previous connection for construction is disclosed.

In embodiments, a system for data communication, using a computer vision system, between nodes having the ability to configure a new connection using maintained data characterizing a timing variability of a current/previous connection for construction is disclosed.

In embodiments, a system for data communication, using a computer vision system, between nodes having the ability to configure a new connection using maintained data characterizing bandwidth of a current/previous connection for construction is disclosed.

In embodiments, a system for data communication, using a computer vision system, between nodes having the ability to configure a new connection using maintained data characterizing round trip time of a current/previous connection for construction is disclosed.

In embodiments, a system for data communication, using a computer vision system, between nodes having the ability to configure a new connection using maintained data characterizing communication control parameters of a current/previous connection for construction is disclosed.

In embodiments, a system for data communication, using a computer vision system, between nodes having the ability to configure new connection using maintained data characterizing forward error correction parameters of a current/previous connection for construction is disclosed.

In embodiments, a system for data communication, using a computer vision system, between nodes having a data store for maintaining data characterizing one or more current or previous data communication connections and a connection initiation module for initiating new data communication connections based on maintained data for construction is disclosed.

In embodiments, a system for data communication, using a computer vision system, between nodes having the ability to transmit a first subset of data messages over a lower latency data path and a second subset of messages over a higher latency data path for construction is disclosed.

In embodiments, a system for data communication, using a computer vision system, between nodes having the ability to transmit a first subset of data messages that are time critical over a lower latency data path and a second subset of messages over a higher latency data path for construction is disclosed.

In embodiments, a system for data communication, using a computer vision system, between nodes having the ability to transmit a first initial subset of data messages over a lower latency data path and a second subset of messages that are subsequently available over a higher latency data path for construction is disclosed.

In embodiments, a system for data communication, using a computer vision system, between nodes having the ability to transmit a first subset of acknowledgment messages over a lower latency data path and a second subset of data messages over a higher latency data path for construction is disclosed.

In embodiments, a system for data communication, using a computer vision system, between nodes having the ability to transmit a first subset of supplemental/redundancy data messages over a lower latency data path and a second subset of data messages over a higher latency data path for construction is disclosed.

In embodiments, a system for data communication, using a computer vision system, between nodes having a degree of redundancy associated with each message that is based on message position in the transmission order for construction is disclosed.

In embodiments, a system for data communication, using a computer vision system, between nodes having a degree of redundancy associated with each message that increases as the position of the messages is non-decreasing for construction is disclosed.

In embodiments, a system for data communication, using a computer vision system, between nodes having a degree of redundancy associated with each message that is based on message position in the transmission order and in response to receiving feedback messages for construction is disclosed.

In embodiments, a system for data communication, using a computer vision system, between nodes having a degree of redundancy associated with each message that is based on message position in the transmission order and in response to receiving feedback messages, and adding or removing redundancy messages from the queue based on the feedback messages for construction is disclosed.

In embodiments, a system for data communication, using a computer vision system, between nodes having the ability to adjust the number of messages sent over each of multiple different data paths with different communication protocols if it is determined that a data path is altering flow of messages for construction is disclosed.

In embodiments, a system for data communication, using a computer vision system, between nodes having the ability to adjust the number of messages sent over each of multiple different data paths with different communication protocols if it is determined that a data path is altering flow of messages initial division based on previous communication connections for construction is disclosed.

In embodiments, a system for data communication, using a computer vision system, between nodes having the ability to modify/add/remove redundancy information associated with encoded data as it travels from node to node via channels based on channel characteristics for construction is disclosed.

In embodiments, a system for data communication, using a computer vision system, between nodes having the ability to send FEC packets at an estimated rate of loss events (isolated packet loss or burst of consecutive packets) for construction is disclosed.

In embodiments, a system for data communication, using a computer vision system, between nodes having combined coding, TCP, and pacing of packet transmissions for construction is disclosed.

In embodiments, a system for data communication, using a computer vision system, between nodes having a forward error correction code construction that interleaves groups of message packets and parity packets and has coding across overlapping groups of message packets for construction is disclosed.

In embodiments, a system for data communication, using a computer vision system, between nodes having a variant of TCP that combines delay-based backoff with a stable window increase function for construction is disclosed.

In embodiments, a system for data collection, using a computer vision system, in an industrial environment having the use of an analog cross point switch for collecting variable groups of analog sensor inputs for ships is disclosed.

In embodiments, a system for data collection, using a computer vision system, in an industrial environment having up front signal conditioning on a multiplexer for improved signal-to-noise ratio for ships is disclosed.

In embodiments, a system for data collection, using a computer vision system, in an industrial environment having multiplexer continuous monitoring alarming features for ships is disclosed.

In embodiments, a system for data collection, using a computer vision system, in an industrial environment having the use of distributed CPLD chips with dedicated bus for logic control of multiple MUX and data acquisition sections for ships is disclosed.

In embodiments, a system for data collection, using a computer vision system, in an industrial environment having high-amperage input capability using solid state relays and design topology for ships is disclosed.

In embodiments, a system for data collection, using a computer vision system, in an industrial environment having power-down ability of at least one of an analog sensor channel and a component board for ships is disclosed.

In embodiments, a system for data collection, using a computer vision system, in an industrial environment having unique electrostatic protection for trigger and vibration inputs for ships is disclosed.

In embodiments, a system for data collection, using a computer vision system, in an industrial environment having precise voltage reference for A/D zero reference for ships is disclosed.

In embodiments, a system for data collection, using a computer vision system, in an industrial environment having a phase-lock loop band-pass tracking filter for obtaining slow-speed RPMs and phase information for ships is disclosed.

In embodiments, a system for data collection, using a computer vision system, in an industrial environment having digital derivation of phase relative to input and trigger channels using on-board timers for ships is disclosed.

In embodiments, a system for data collection, using a computer vision system, in an industrial environment having a peak-detector for auto-scaling that is routed into a separate analog-to-digital converter for peak detection for ships is disclosed.

In embodiments, a system for data collection, using a computer vision system, in an industrial environment having routing of a trigger channel that is either raw or buffered into other analog channels for ships is disclosed.

In embodiments, a system for data collection, using a computer vision system, in an industrial environment having the use of higher input oversampling for delta-sigma A/D for lower sampling rate outputs to minimize AA filter requirements for ships is disclosed.

In embodiments, a system for data collection, using a computer vision system, in an industrial environment having the use of a CPLD as a clock-divider for a delta-sigma analog-to-digital converter to achieve lower sampling rates without the need for digital resampling for ships is disclosed.

In embodiments, a system for data collection, using a computer vision system, in an industrial environment having long blocks of data at a high-sampling rate as opposed to multiple sets of data taken at different sampling rates for ships is disclosed.

In embodiments, a system for data collection, using a computer vision system, in an industrial environment having storage of calibration data with maintenance history on-board card set for ships is disclosed.

In embodiments, a system for data collection, using a computer vision system, in an industrial environment having a rapid route creation capability using hierarchical templates for ships is disclosed.

In embodiments, a system for data collection, using a computer vision system, in an industrial environment having intelligent management of data collection bands for ships is disclosed.

In embodiments, a system for data collection, using a computer vision system, in an industrial environment having a neural net expert system using intelligent management of data collection bands for ships is disclosed.

In embodiments, a system for data collection, using a computer vision system, in an industrial environment having use of a database hierarchy in sensor data analysis for ships is disclosed.

In embodiments, a system for data collection, using a computer vision system, in an industrial environment having an expert system GUI graphical approach to defining intelligent data collection bands and diagnoses for the expert system for ships is disclosed.

In embodiments, a system for data collection, using a computer vision system, in an industrial environment having a graphical approach for back-calculation definition for ships is disclosed.

In embodiments, a system for data collection, using a computer vision system, in an industrial environment having proposed bearing analysis methods for ships is disclosed.

In embodiments, a system for data collection, using a computer vision system, in an industrial environment having torsional vibration detection/analysis utilizing transitory signal analysis for ships is disclosed.

In embodiments, a system for data collection, using a computer vision system, in an industrial environment having improved integration using both analog and digital methods for ships is disclosed.

In embodiments, a system for data collection, using a computer vision system, in an industrial environment having adaptive scheduling techniques for continuous monitoring of analog data in a local environment for ships is disclosed.

In embodiments, a system for data collection, using a computer vision system, in an industrial environment having data acquisition parking features for ships is disclosed.

In embodiments, a system for data collection, using a computer vision system, in an industrial environment having a self-sufficient data acquisition box for ships is disclosed.

In embodiments, a system for data collection, using a computer vision system, in an industrial environment having SD card storage for ships is disclosed.

In embodiments, a system for data collection, using a computer vision system, in an industrial environment having extended onboard statistical capabilities for continuous monitoring for ships is disclosed.

In embodiments, a system for data collection, using a computer vision system, in an industrial environment having the use of ambient, local and vibration noise for prediction for ships is disclosed.

In embodiments, a system for data collection, using a computer vision system, in an industrial environment having smart route changes route based on incoming data or alarms enable simultaneous dynamic data for analysis or correlation for ships is disclosed.

In embodiments, a system for data collection, using a computer vision system, in an industrial environment having smart ODS and transfer functions for ships is disclosed.

In embodiments, a system for data collection, using a computer vision system, in an industrial environment having hierarchical multiplexer for ships is disclosed.

In embodiments, a system for data collection, using a computer vision system, in an industrial environment having identification sensor overload for ships is disclosed.

In embodiments, a system for data collection, using a computer vision system, in an industrial environment having RF identification and an inclinometer for ships is disclosed.

In embodiments, a system for data collection, using a computer vision system, in an industrial environment having continuous ultrasonic monitoring for ships is disclosed.

In embodiments, a system for data collection, using a computer vision system, in an industrial environment having cloud-based, machine pattern recognition based on fusion of remote, analog industrial sensors for ships is disclosed.

In embodiments, a system for data collection, using a computer vision system, in an industrial environment having cloud-based, machine pattern analysis of state information from multiple analog industrial sensors to provide anticipated state information for an industrial system for ships is disclosed.

In embodiments, a system for data collection, using a computer vision system, in an industrial environment having cloud-based policy automation engine for IoT, with creation, deployment and management of IoT devices for ships is disclosed.

In embodiments, a system for data collection, using a computer vision system, in an industrial environment having on-device sensor fusion and data storage for industrial IoT devices for ships is disclosed.

In embodiments, a system for data collection, using a computer vision system, in an industrial environment having a self-organizing data marketplace for industrial IoT data for ships is disclosed.

In embodiments, a system for data collection, using a computer vision system, in an industrial environment having self-organization of data pools based on utilization and/or yield metrics for ships is disclosed.

In embodiments, a system for data collection, using a computer vision system, in an industrial environment having training AI models based on industry-specific feedback for ships is disclosed.

In embodiments, a system for data collection, using a computer vision system, in an industrial environment having a self-organized swarm of industrial data collectors for ships is disclosed.

In embodiments, a system for data collection, using a computer vision system, in an industrial environment having an IoT distributed ledger for ships is disclosed.

In embodiments, a system for data collection, using a computer vision system, in an industrial environment having a self-organizing collector for ships is disclosed.

In embodiments, a system for data collection, using a computer vision system, in an industrial environment having a network-sensitive collector for ships is disclosed.

In embodiments, a system for data collection, using a computer vision system, in an industrial environment having a remotely organized collector for ships is disclosed.

In embodiments, a system for data collection, using a computer vision system, in an industrial environment having a self-organizing storage for a multi-sensor data collector for ships is disclosed.

In embodiments, a system for data collection, using a computer vision system, in an industrial environment having a self-organizing network coding for multi-sensor data network for ships is disclosed.

In embodiments, a system for data collection, using a computer vision system, in an industrial environment having a wearable haptic user interface for an industrial sensor data collector, with vibration, heat, electrical and/or sound outputs for ships is disclosed.

In embodiments, a system for data collection, using a computer vision system, in an industrial environment having heat maps displaying collection data for AR/VR for ships is disclosed.

In embodiments, a system for data collection, using a computer vision system, in an industrial environment having automatically tuned AR/VR visualization of data collected by a data collector for ships is disclosed.

In embodiments, a system for data collection, using a computer vision system, in an industrial environment having an IoT platform for ships is disclosed.

In embodiments, a system for data collection, using a computer vision system, in an industrial environment having an IoT data adapter for receiving data inputs and establishing a connection with one or more available IoT cloud platforms to publish the data for ships is disclosed.

In embodiments, a system for data collection, using a computer vision system, in an industrial environment having a condition detector for detecting conditions related to connect attempts made by the IoT data adapter to one or more IoT cloud platforms for ships is disclosed.

In embodiments, a system for data collection, using a computer vision system, in an industrial environment having an IoT data adapter with an adaptation engine for ships is disclosed.

In embodiments, a system for data collection, using a computer vision system, in an industrial environment having the use of machine learning to prepare a data packet or stream for ships is disclosed.

In embodiments, a system for data collection, using a computer vision system, in an industrial environment having a data marketplace that provides a pool of available cloud networking platforms for ships is disclosed.

In embodiments, a system for data collection, using a computer vision system, in an industrial environment having a messaging utility that provides a cloud platform user interface with a message indicating the availability of a new data source and data source integration and usage instructions for ships is disclosed.

In embodiments, a system for data communication, using a computer vision system, between nodes having the ability to maintain a first and second transmission limit based on received rate of arrival and success of delivery feedback messages, and limiting transmission of messages based on the transmission limits for ships is disclosed.

In embodiments, a system for data communication, using a computer vision system, between nodes having the ability to limit transmission of further messages not yet acknowledged as successfully delivered according to the window size for ships is disclosed.

In embodiments, a system for data communication, using a computer vision system, between nodes having the ability to maintain an estimate of a rate of loss events and use it to adjust the rate of redundancy messages for ships is disclosed.

In embodiments, a system for data communication, using a computer vision system, between nodes having an estimated rate of loss events where the error correction code used to determine redundancy messages chosen is based on the estimated rate of loss events for ships is disclosed.

In embodiments, a system for data communication, using a computer vision system, between nodes having the ability to apply forward error correction based on messages received describing channel characteristics for ships is disclosed.

In embodiments, a system for data communication, using a computer vision system, between nodes having the ability to maintain/set timers based on occurrences of delivery order events and delaying transmission of feedback messages using timers for ships is disclosed.

In embodiments, a system for data communication, using a computer vision system, between nodes having the ability to maintain/set timers based on occurrences of delivery order events and delaying modification of congestion window size based on timers for ships is disclosed.

In embodiments, a system for data communication, using a computer vision system, between nodes having the ability to maintain/set timers based on occurrences of delivery order events, delaying modification of congestion window size based on timers, and cancelling modification of congestion window size when receiving a feedback message indicating successful delivery for ships is disclosed.

In embodiments, a system for data communication, using a computer vision system, between nodes having the ability to configure a new connection using maintained data characterizing a current/previous connection for ships is disclosed.

In embodiments, a system for data communication, using a computer vision system, between nodes having the ability to configure a new connection using maintained data characterizing an error rate of a current/previous connection for ships is disclosed.

In embodiments, a system for data communication, using a computer vision system, between nodes having the ability to configure a new connection using maintained data characterizing a timing variability of a current/previous connection for ships is disclosed.

In embodiments, a system for data communication, using a computer vision system, between nodes having the ability to configure a new connection using maintained data characterizing bandwidth of a current/previous connection for ships is disclosed.

In embodiments, a system for data communication, using a computer vision system, between nodes having the ability to configure a new connection using maintained data characterizing round trip time of a current/previous connection for ships is disclosed.

In embodiments, a system for data communication, using a computer vision system, between nodes having the ability to configure a new connection using maintained data characterizing communication control parameters of a current/previous connection for ships is disclosed.

In embodiments, a system for data communication, using a computer vision system, between nodes having the ability to configure new connection using maintained data characterizing forward error correction parameters of a current/previous connection for ships is disclosed.

In embodiments, a system for data communication, using a computer vision system, between nodes having a data store for maintaining data characterizing one or more current or previous data communication connections and a connection initiation module for initiating new data communication connections based on maintained data for ships is disclosed.

In embodiments, a system for data communication, using a computer vision system, between nodes having the ability to transmit a first subset of data messages over a lower latency data path and a second subset of messages over a higher latency data path for ships is disclosed.

In embodiments, a system for data communication, using a computer vision system, between nodes having the ability to transmit a first subset of data messages that are time critical over a lower latency data path and a second subset of messages over a higher latency data path for ships is disclosed.

In embodiments, a system for data communication, using a computer vision system, between nodes having the ability to transmit a first initial subset of data messages over a lower latency data path and a second subset of messages that are subsequently available over a higher latency data path for ships is disclosed.

In embodiments, a system for data communication, using a computer vision system, between nodes having the ability to transmit a first subset of acknowledgment messages over a lower latency data path and a second subset of data messages over a higher latency data path for ships is disclosed.

In embodiments, a system for data communication, using a computer vision system, between nodes having the ability to transmit a first subset of supplemental/redundancy data messages over a lower latency data path and a second subset of data messages over a higher latency data path for ships is disclosed.

In embodiments, a system for data communication, using a computer vision system, between nodes having a degree of redundancy associated with each message that is based on message position in the transmission order for ships is disclosed.

In embodiments, a system for data communication, using a computer vision system, between nodes having a degree of redundancy associated with each message that increases as the position of the messages is non-decreasing for ships is disclosed.

In embodiments, a system for data communication, using a computer vision system, between nodes having a degree of redundancy associated with each message that is based on message position in the transmission order and in response to receiving feedback messages for ships is disclosed.

In embodiments, a system for data communication, using a computer vision system, between nodes having a degree of redundancy associated with each message that is based on message position in the transmission order and in response to receiving feedback messages, and adding or removing redundancy messages from the queue based on the feedback messages for ships is disclosed.

In embodiments, a system for data communication, using a computer vision system, between nodes having the ability to adjust the number of messages sent over each of multiple different data paths with different communication protocols if it is determined that a data path is altering flow of messages for ships is disclosed.

In embodiments, a system for data communication, using a computer vision system, between nodes having the ability to adjust the number of messages sent over each of multiple different data paths with different communication protocols if it is determined that a data path is altering flow of messages initial division based on previous communication connections for ships is disclosed.

In embodiments, a system for data communication, using a computer vision system, between nodes having the ability to modify/add/remove redundancy information associated with encoded data as it travels from node to node via channels based on channel characteristics for ships is disclosed.

In embodiments, a system for data communication, using a computer vision system, between nodes having the ability to send FEC packets at an estimated rate of loss events (isolated packet loss or burst of consecutive packets) for ships is disclosed.

In embodiments, a system for data communication, using a computer vision system, between nodes having combined coding, TCP, and pacing of packet transmissions for ships is disclosed.

In embodiments, a system for data communication, using a computer vision system, between nodes having a forward error correction code construction that interleaves groups of message packets and parity packets and has coding across overlapping groups of message packets for ships is disclosed.

In embodiments, a system for data communication, using a computer vision system, between nodes having a variant of TCP that combines delay-based back-off with a stable window increase function for ships is disclosed.

In embodiments, a system for data collection, using a computer vision system, in an industrial environment having the use of an analog cross point switch for collecting variable groups of analog sensor inputs for submarine is disclosed.

In embodiments, a system for data collection, using a computer vision system, in an industrial environment having up front signal conditioning on a multiplexer for improved signal-to-noise ratio for submarine is disclosed.

In embodiments, a system for data collection, using a computer vision system, in an industrial environment having multiplexer continuous monitoring alarming features for submarine is disclosed.

In embodiments, a system for data collection, using a computer vision system, in an industrial environment having the use of distributed CPLD chips with dedicated bus for logic control of multiple MUX and data acquisition sections for submarine is disclosed.

In embodiments, a system for data collection, using a computer vision system, in an industrial environment having high-amperage input capability using solid state relays and design topology for submarine is disclosed.

In embodiments, a system for data collection, using a computer vision system, in an industrial environment having power-down ability of at least one of an analog sensor channel and a component board for submarine is disclosed.

In embodiments, a system for data collection, using a computer vision system, in an industrial environment having unique electrostatic protection for trigger and vibration inputs for submarine is disclosed.

In embodiments, a system for data collection, using a computer vision system, in an industrial environment having precise voltage reference for A/D zero reference for submarine is disclosed.

In embodiments, a system for data collection, using a computer vision system, in an industrial environment having a phase-lock loop band-pass tracking filter for obtaining slow-speed RPMs and phase information for submarine is disclosed.

In embodiments, a system for data collection, using a computer vision system, in an industrial environment having digital derivation of phase relative to input and trigger channels using on-board timers for submarine is disclosed.

In embodiments, a system for data collection, using a computer vision system, in an industrial environment having a peak-detector for auto-scaling that is routed into a separate analog-to-digital converter for peak detection for submarine is disclosed.

In embodiments, a system for data collection, using a computer vision system, in an industrial environment having routing of a trigger channel that is either raw or buffered into other analog channels for submarine is disclosed.

In embodiments, a system for data collection, using a computer vision system, in an industrial environment having the use of higher input oversampling for delta-sigma A/D for lower sampling rate outputs to minimize AA filter requirements for submarine is disclosed.

In embodiments, a system for data collection, using a computer vision system, in an industrial environment having the use of a CPLD as a clock-divider for a delta-sigma analog-to-digital converter to achieve lower sampling rates without the need for digital resampling for submarine is disclosed.

In embodiments, a system for data collection, using a computer vision system, in an industrial environment having long blocks of data at a high-sampling rate as opposed to multiple sets of data taken at different sampling rates for submarine is disclosed.

In embodiments, a system for data collection, using a computer vision system, in an industrial environment having storage of calibration data with maintenance history on-board card set for submarine is disclosed.

In embodiments, a system for data collection, using a computer vision system, in an industrial environment having a rapid route creation capability using hierarchical templates for submarine is disclosed.

In embodiments, a system for data collection, using a computer vision system, in an industrial environment having intelligent management of data collection bands for submarine is disclosed.

In embodiments, a system for data collection, using a computer vision system, in an industrial environment having a neural net expert system using intelligent management of data collection bands for submarine is disclosed.

In embodiments, a system for data collection, using a computer vision system, in an industrial environment having use of a database hierarchy in sensor data analysis for submarine is disclosed.

In embodiments, a system for data collection, using a computer vision system, in an industrial environment having an expert system GUI graphical approach to defining intelligent data collection bands and diagnoses for the expert system for submarine is disclosed.

In embodiments, a system for data collection, using a computer vision system, in an industrial environment having a graphical approach for back-calculation definition for submarine is disclosed.

In embodiments, a system for data collection, using a computer vision system, in an industrial environment having proposed bearing analysis methods for submarine is disclosed.

In embodiments, a system for data collection, using a computer vision system, in an industrial environment having torsional vibration detection/analysis utilizing transitory signal analysis for submarine is disclosed.

In embodiments, a system for data collection, using a computer vision system, in an industrial environment having improved integration using both analog and digital methods for submarine is disclosed.

In embodiments, a system for data collection, using a computer vision system, in an industrial environment having adaptive scheduling techniques for continuous monitoring of analog data in a local environment for submarine is disclosed.

In embodiments, a system for data collection, using a computer vision system, in an industrial environment having data acquisition parking features for submarine is disclosed.

In embodiments, a system for data collection, using a computer vision system, in an industrial environment having a self-sufficient data acquisition box for submarine is disclosed.

In embodiments, a system for data collection, using a computer vision system, in an industrial environment having SD card storage for submarine is disclosed.

In embodiments, a system for data collection, using a computer vision system, in an industrial environment having extended onboard statistical capabilities for continuous monitoring for submarine is disclosed.

In embodiments, a system for data collection, using a computer vision system, in an industrial environment having the use of ambient, local and vibration noise for prediction for submarine is disclosed.

In embodiments, a system for data collection, using a computer vision system, in an industrial environment having smart route changes route based on incoming data or alarms enable simultaneous dynamic data for analysis or correlation for submarine is disclosed.

In embodiments, a system for data collection, using a computer vision system, in an industrial environment having smart ODS and transfer functions for submarine is disclosed.

In embodiments, a system for data collection, using a computer vision system, in an industrial environment having hierarchical multiplexer for submarine is disclosed.

In embodiments, a system for data collection, using a computer vision system, in an industrial environment having identification sensor overload for submarine is disclosed.

In embodiments, a system for data collection, using a computer vision system, in an industrial environment having RF identification and an inclinometer for submarine is disclosed.

In embodiments, a system for data collection, using a computer vision system, in an industrial environment having continuous ultrasonic monitoring for submarine is disclosed.

In embodiments, a system for data collection, using a computer vision system, in an industrial environment having cloud-based, machine pattern recognition based on fusion of remote, analog industrial sensors for submarine is disclosed.

In embodiments, a system for data collection, using a computer vision system, in an industrial environment having cloud-based, machine pattern analysis of state information from multiple analog industrial sensors to provide anticipated state information for an industrial system for submarine is disclosed.

In embodiments, a system for data collection, using a computer vision system, in an industrial environment having cloud-based policy automation engine for IoT, with creation, deployment and management of IoT devices for submarine is disclosed.

In embodiments, a system for data collection, using a computer vision system, in an industrial environment having on-device sensor fusion and data storage for industrial IoT devices for submarine is disclosed.

In embodiments, a system for data collection, using a computer vision system, in an industrial environment having a self-organizing data marketplace for industrial IoT data for submarine is disclosed.

In embodiments, a system for data collection, using a computer vision system, in an industrial environment having self-organization of data pools based on utilization and/or yield metrics for submarine is disclosed.

In embodiments, a system for data collection, using a computer vision system, in an industrial environment having training AI models based on industry-specific feedback for submarine is disclosed.

In embodiments, a system for data collection, using a computer vision system, in an industrial environment having a self-organized swarm of industrial data collectors for submarine is disclosed.

In embodiments, a system for data collection, using a computer vision system, in an industrial environment having an IoT distributed ledger for submarine is disclosed.

In embodiments, a system for data collection, using a computer vision system, in an industrial environment having a self-organizing collector for submarine is disclosed.

In embodiments, a system for data collection, using a computer vision system, in an industrial environment having a network-sensitive collector for submarine is disclosed.

In embodiments, a system for data collection, using a computer vision system, in an industrial environment having a remotely organized collector for submarine is disclosed.

In embodiments, a system for data collection, using a computer vision system, in an industrial environment having a self-organizing storage for a multi-sensor data collector for submarine is disclosed.

In embodiments, a system for data collection, using a computer vision system, in an industrial environment having a self-organizing network coding for multi-sensor data network for submarine is disclosed.

In embodiments, a system for data collection, using a computer vision system, in an industrial environment having a wearable haptic user interface for an industrial sensor data collector, with vibration, heat, electrical and/or sound outputs for submarine is disclosed.

In embodiments, a system for data collection, using a computer vision system, in an industrial environment having heat maps displaying collection data for AR/VR for submarine is disclosed.

In embodiments, a system for data collection, using a computer vision system, in an industrial environment having automatically tuned AR/VR visualization of data collected by a data collector for submarine is disclosed.

In embodiments, a system for data collection, using a computer vision system, in an industrial environment having an IoT platform for submarine is disclosed.

In embodiments, a system for data collection, using a computer vision system, in an industrial environment having an IoT data adapter for receiving data inputs and establishing a connection with one or more available IoT cloud platforms to publish the data for submarine is disclosed.

In embodiments, a system for data collection, using a computer vision system, in an industrial environment having a condition detector for detecting conditions related to connect attempts made by the IoT data adapter to one or more IoT cloud platforms for submarine is disclosed.

In embodiments, a system for data collection, using a computer vision system, in an industrial environment having an IoT data adapter with an adaptation engine for submarine is disclosed.

In embodiments, a system for data collection, using a computer vision system, in an industrial environment having the use of machine learning to prepare a data packet or stream for submarine is disclosed.

In embodiments, a system for data collection, using a computer vision system, in an industrial environment having a data marketplace that provides a pool of available cloud networking platforms for submarine is disclosed.

In embodiments, a system for data collection, using a computer vision system, in an industrial environment having a messaging utility that provides a cloud platform user interface with a message indicating the availability of a new data source and data source integration and usage instructions for submarine is disclosed.

In embodiments, a system for data communication, using a computer vision system, between nodes having the ability to maintain a first and second transmission limit based on received rate of arrival and success of delivery feedback messages, and limiting transmission of messages based on the transmission limits for submarine is disclosed.

In embodiments, a system for data communication, using a computer vision system, between nodes having the ability to limit transmission of further messages not yet acknowledged as successfully delivered according to the window size for submarine is disclosed.

In embodiments, a system for data communication, using a computer vision system, between nodes having the ability to maintain an estimate of a rate of loss events and use it to adjust the rate of redundancy messages for submarine is disclosed.

In embodiments, a system for data communication, using a computer vision system, between nodes having an estimated rate of loss events where the error correction code used to determine redundancy messages chosen is based on the estimated rate of loss events for submarine is disclosed.

In embodiments, a system for data communication, using a computer vision system, between nodes having the ability to apply forward error correction based on messages received describing channel characteristics for submarine is disclosed.

In embodiments, a system for data communication, using a computer vision system, between nodes having the ability to maintain/set timers based on occurrences of delivery order events and delaying transmission of feedback messages using timers for submarine is disclosed.

In embodiments, a system for data communication, using a computer vision system, between nodes having the ability to maintain/set timers based on occurrences of delivery order events and delaying modification of congestion window size based on timers for submarine is disclosed.

In embodiments, a system for data communication, using a computer vision system, between nodes having the ability to maintain/set timers based on occurrences of delivery order events, delaying modification of congestion window size based on timers, and cancelling modification of congestion window size when receiving a feedback message indicating successful delivery for submarine is disclosed.

In embodiments, a system for data communication, using a computer vision system, between nodes having the ability to configure a new connection using maintained data characterizing a current/previous connection for submarine is disclosed.

In embodiments, a system for data communication, using a computer vision system, between nodes having the ability to configure a new connection using maintained data characterizing an error rate of a current/previous connection for submarine is disclosed.

In embodiments, a system for data communication, using a computer vision system, between nodes having the ability to configure a new connection using maintained data characterizing a timing variability of a current/previous connection for submarine is disclosed.

In embodiments, a system for data communication, using a computer vision system, between nodes having the ability to configure a new connection using maintained data characterizing bandwidth of a current/previous connection for submarine is disclosed.

In embodiments, a system for data communication, using a computer vision system, between nodes having the ability to configure a new connection using maintained data characterizing round trip time of a current/previous connection for submarine is disclosed.

In embodiments, a system for data communication, using a computer vision system, between nodes having the ability to configure a new connection using maintained data characterizing communication control parameters of a current/previous connection for submarine is disclosed.

In embodiments, a system for data communication, using a computer vision system, between nodes having the ability to configure new connection using maintained data characterizing forward error correction parameters of a current/previous connection for submarine is disclosed.

In embodiments, a system for data communication, using a computer vision system, between nodes having a data store for maintaining data characterizing one or more current or previous data communication connections and a connection initiation module for initiating new data communication connections based on maintained data for submarine is disclosed.

In embodiments, a system for data communication, using a computer vision system, between nodes having the ability to transmit a first subset of data messages over a lower latency data path and a second subset of messages over a higher latency data path for submarine is disclosed.

In embodiments, a system for data communication, using a computer vision system, between nodes having the ability to transmit a first subset of data messages that are time critical over a lower latency data path and a second subset of messages over a higher latency data path for submarine is disclosed.

In embodiments, a system for data communication, using a computer vision system, between nodes having the ability to transmit a first initial subset of data messages over a lower latency data path and a second subset of messages that are subsequently available over a higher latency data path for submarine is disclosed.

In embodiments, a system for data communication, using a computer vision system, between nodes having the ability to transmit a first subset of acknowledgment messages over a lower latency data path and a second subset of data messages over a higher latency data path for submarine is disclosed.

In embodiments, a system for data communication, using a computer vision system, between nodes having the ability to transmit a first subset of supplemental/redundancy data messages over a lower latency data path and a second subset of data messages over a higher latency data path for submarine is disclosed.

In embodiments, a system for data communication, using a computer vision system, between nodes having a degree of redundancy associated with each message that is based on message position in the transmission order for submarine is disclosed.

In embodiments, a system for data communication, using a computer vision system, between nodes having a degree of redundancy associated with each message that increases as the position of the messages is non-decreasing for submarine is disclosed.

In embodiments, a system for data communication, using a computer vision system, between nodes having a degree of redundancy associated with each message that is based on message position in the transmission order and in response to receiving feedback messages for submarine is disclosed.

In embodiments, a system for data communication, using a computer vision system, between nodes having a degree of redundancy associated with each message that is based on message position in the transmission order and in response to receiving feedback messages, and adding or removing redundancy messages from the queue based on the feedback messages for submarine is disclosed.

In embodiments, a system for data communication, using a computer vision system, between nodes having the ability to adjust the number of messages sent over each of multiple different data paths with different communication protocols if it is determined that a data path is altering flow of messages for submarine is disclosed.

In embodiments, a system for data communication, using a computer vision system, between nodes having the ability to adjust the number of messages sent over each of multiple different data paths with different communication protocols if it is determined that a data path is altering flow of messages initial division based on previous communication connections for submarine is disclosed.

In embodiments, a system for data communication, using a computer vision system, between nodes having the ability to modify/add/remove redundancy information associated with encoded data as it travels from node to node via channels based on channel characteristics for submarine is disclosed.

In embodiments, a system for data communication, using a computer vision system, between nodes having the ability to send FEC packets at an estimated rate of loss events (isolated packet loss or burst of consecutive packets) for submarine is disclosed.

In embodiments, a system for data communication, using a computer vision system, between nodes having combined coding, TCP, and pacing of packet transmissions for submarine is disclosed.

In embodiments, a system for data communication, using a computer vision system, between nodes having a forward error correction code construction that interleaves groups of message packets and parity packets and has coding across overlapping groups of message packets for submarine is disclosed.

In embodiments, a system for data communication, using a computer vision system, between nodes having a variant of TCP that combines delay-based backoff with a stable window increase function for submarine is disclosed.

In embodiments, a system for data collection, using a computer vision system, in an industrial environment having the use of an analog cross point switch for collecting variable groups of analog sensor inputs for wind energy production is disclosed.

In embodiments, a system for data collection, using a computer vision system, in an industrial environment having up front signal conditioning on a multiplexer for improved signal-to-noise ratio for wind energy production is disclosed.

In embodiments, a system for data collection, using a computer vision system, in an industrial environment having multiplexer continuous monitoring alarming features for wind energy production is disclosed.

In embodiments, a system for data collection, using a computer vision system, in an industrial environment having the use of distributed CPLD chips with dedicated bus for logic control of multiple MUX and data acquisition sections for wind energy production is disclosed.

In embodiments, a system for data collection, using a computer vision system, in an industrial environment having high-amperage input capability using solid state relays and design topology for wind energy production is disclosed.

In embodiments, a system for data collection, using a computer vision system, in an industrial environment having power-down ability of at least one of an analog sensor channel and a component board for wind energy production is disclosed.

In embodiments, a system for data collection, using a computer vision system, in an industrial environment having unique electrostatic protection for trigger and vibration inputs for wind energy production is disclosed.

In embodiments, a system for data collection, using a computer vision system, in an industrial environment having precise voltage reference for A/D zero reference for wind energy production is disclosed.

In embodiments, a system for data collection, using a computer vision system, in an industrial environment having a phase-lock loop band-pass tracking filter for obtaining slow-speed RPMs and phase information for wind energy production is disclosed.

In embodiments, a system for data collection, using a computer vision system, in an industrial environment having digital derivation of phase relative to input and trigger channels using on-board timers for wind energy production is disclosed.

In embodiments, a system for data collection, using a computer vision system, in an industrial environment having a peak-detector for auto-scaling that is routed into a separate analog-to-digital converter for peak detection for wind energy production is disclosed.

In embodiments, a system for data collection, using a computer vision system, in an industrial environment having routing of a trigger channel that is either raw or buffered into other analog channels for wind energy production is disclosed.

In embodiments, a system for data collection, using a computer vision system, in an industrial environment having the use of higher input oversampling for delta-sigma A/D for lower sampling rate outputs to minimize AA filter requirements for wind energy production is disclosed.

In embodiments, a system for data collection, using a computer vision system, in an industrial environment having the use of a CPLD as a clock-divider for a delta-sigma analog-to-digital converter to achieve lower sampling rates without the need for digital resampling for wind energy production is disclosed.

In embodiments, a system for data collection, using a computer vision system, in an industrial environment having long blocks of data at a high-sampling rate as opposed to multiple sets of data taken at different sampling rates for wind energy production is disclosed.

In embodiments, a system for data collection, using a computer vision system, in an industrial environment having storage of calibration data with maintenance history on-board card set for wind energy production is disclosed.

In embodiments, a system for data collection, using a computer vision system, in an industrial environment having a rapid route creation capability using hierarchical templates for wind energy production is disclosed.

In embodiments, a system for data collection, using a computer vision system, in an industrial environment having intelligent management of data collection bands for wind energy production is disclosed.

In embodiments, a system for data collection, using a computer vision system, in an industrial environment having a neural net expert system using intelligent management of data collection bands for wind energy production is disclosed.

In embodiments, a system for data collection, using a computer vision system, in an industrial environment having use of a database hierarchy in sensor data analysis for wind energy production is disclosed.

In embodiments, a system for data collection, using a computer vision system, in an industrial environment having an expert system GUI graphical approach to defining intelligent data collection bands and diagnoses for the expert system for wind energy production is disclosed.

In embodiments, a system for data collection, using a computer vision system, in an industrial environment having a graphical approach for back-calculation definition for wind energy production is disclosed.

In embodiments, a system for data collection, using a computer vision system, in an industrial environment having proposed bearing analysis methods for wind energy production is disclosed.

In embodiments, a system for data collection, using a computer vision system, in an industrial environment having torsional vibration detection/analysis utilizing transitory signal analysis for wind energy production is disclosed.

In embodiments, a system for data collection, using a computer vision system, in an industrial environment having improved integration using both analog and digital methods for wind energy production is disclosed.

In embodiments, a system for data collection, using a computer vision system, in an industrial environment having adaptive scheduling techniques for continuous monitoring of analog data in a local environment for wind energy production is disclosed.

In embodiments, a system for data collection, using a computer vision system, in an industrial environment having data acquisition parking features for wind energy production is disclosed.

In embodiments, a system for data collection, using a computer vision system, in an industrial environment having a self-sufficient data acquisition box for wind energy production is disclosed.

In embodiments, a system for data collection, using a computer vision system, in an industrial environment having SD card storage for wind energy production is disclosed.

In embodiments, a system for data collection, using a computer vision system, in an industrial environment having extended onboard statistical capabilities for continuous monitoring for wind energy production is disclosed.

In embodiments, a system for data collection, using a computer vision system, in an industrial environment having the use of ambient, local and vibration noise for prediction for wind energy production is disclosed.

In embodiments, a system for data collection, using a computer vision system, in an industrial environment having smart route changes route based on incoming data or alarms enable simultaneous dynamic data for analysis or correlation for wind energy production is disclosed.

In embodiments, a system for data collection, using a computer vision system, in an industrial environment having smart ODS and transfer functions for wind energy production is disclosed.

In embodiments, a system for data collection, using a computer vision system, in an industrial environment having hierarchical multiplexer for wind energy production is disclosed.

In embodiments, a system for data collection, using a computer vision system, in an industrial environment having identification sensor overload for wind energy production is disclosed.

In embodiments, a system for data collection, using a computer vision system, in an industrial environment having RF identification and an inclinometer for wind energy production is disclosed.

In embodiments, a system for data collection, using a computer vision system, in an industrial environment having continuous ultrasonic monitoring for wind energy production is disclosed.

In embodiments, a system for data collection, using a computer vision system, in an industrial environment having cloud-based, machine pattern recognition based on fusion of remote, analog industrial sensors for wind energy production is disclosed.

In embodiments, a system for data collection, using a computer vision system, in an industrial environment having cloud-based, machine pattern analysis of state information from multiple analog industrial sensors to provide anticipated state information for an industrial system for wind energy production is disclosed.

In embodiments, a system for data collection, using a computer vision system, in an industrial environment having cloud-based policy automation engine for IoT, with creation, deployment and management of IoT devices for wind energy production is disclosed.

In embodiments, a system for data collection, using a computer vision system, in an industrial environment having on-device sensor fusion and data storage for industrial IoT devices for wind energy production is disclosed.

In embodiments, a system for data collection, using a computer vision system, in an industrial environment having a self-organizing data marketplace for industrial IoT data for wind energy production is disclosed.

In embodiments, a system for data collection, using a computer vision system, in an industrial environment having self-organization of data pools based on utilization and/or yield metrics for wind energy production is disclosed.

In embodiments, a system for data collection, using a computer vision system, in an industrial environment having training AI models based on industry-specific feedback for wind energy production is disclosed.

In embodiments, a system for data collection, using a computer vision system, in an industrial environment having a self-organized swarm of industrial data collectors for wind energy production is disclosed.

In embodiments, a system for data collection, using a computer vision system, in an industrial environment having an IoT distributed ledger for wind energy production is disclosed.

In embodiments, a system for data collection, using a computer vision system, in an industrial environment having a self-organizing collector for wind energy production is disclosed.

In embodiments, a system for data collection, using a computer vision system, in an industrial environment having a network-sensitive collector for wind energy production is disclosed.

In embodiments, a system for data collection, using a computer vision system, in an industrial environment having a remotely organized collector for wind energy production is disclosed.

In embodiments, a system for data collection, using a computer vision system, in an industrial environment having a self-organizing storage for a multi-sensor data collector for wind energy production is disclosed.

In embodiments, a system for data collection, using a computer vision system, in an industrial environment having a self-organizing network coding for multi-sensor data network for wind energy production is disclosed.

In embodiments, a system for data collection, using a computer vision system, in an industrial environment having a wearable haptic user interface for an industrial sensor data collector, with vibration, heat, electrical and/or sound outputs for wind energy production is disclosed.

In embodiments, a system for data collection, using a computer vision system, in an industrial environment having heat maps displaying collection data for AR/VR for wind energy production is disclosed.

In embodiments, a system for data collection, using a computer vision system, in an industrial environment having automatically tuned AR/VR visualization of data collected by a data collector for wind energy production is disclosed.

In embodiments, a system for data collection, using a computer vision system, in an industrial environment having an IoT platform for wind energy production is disclosed.

In embodiments, a system for data collection, using a computer vision system, in an industrial environment having an IoT data adapter for receiving data inputs and establishing a connection with one or more available IoT cloud platforms to publish the data for wind energy production is disclosed.

In embodiments, a system for data collection, using a computer vision system, in an industrial environment having a condition detector for detecting conditions related to connect attempts made by the IoT data adapter to one or more IoT cloud platforms for wind energy production is disclosed.

In embodiments, a system for data collection, using a computer vision system, in an industrial environment having an IoT data adapter with an adaptation engine for wind energy production is disclosed.

In embodiments, a system for data collection, using a computer vision system, in an industrial environment having the use of machine learning to prepare a data packet or stream for wind energy production is disclosed.

In embodiments, a system for data collection, using a computer vision system, in an industrial environment having a data marketplace that provides a pool of available cloud networking platforms for wind energy production is disclosed.

In embodiments, a system for data collection, using a computer vision system, in an industrial environment having a messaging utility that provides a cloud platform user interface with a message indicating the availability of a new data source and data source integration and usage instructions for wind energy production is disclosed.

In embodiments, a system for data communication, using a computer vision system, between nodes having the ability to maintain a first and second transmission limit based on received rate of arrival and success of delivery feedback messages, and limiting transmission of messages based on the transmission limits for wind energy production is disclosed.

In embodiments, a system for data communication, using a computer vision system, between nodes having the ability to limit transmission of further messages not yet acknowledged as successfully delivered according to the window size for wind energy production is disclosed.

In embodiments, a system for data communication, using a computer vision system, between nodes having the ability to maintain an estimate of a rate of loss events and use it to adjust the rate of redundancy messages for wind energy production is disclosed.

In embodiments, a system for data communication, using a computer vision system, between nodes having an estimated rate of loss events where the error correction code used to determine redundancy messages chosen is based on the estimated rate of loss events for wind energy production is disclosed.

In embodiments, a system for data communication, using a computer vision system, between nodes having the ability to apply forward error correction based on messages received describing channel characteristics for wind energy production is disclosed.

In embodiments, a system for data communication, using a computer vision system, between nodes having the ability to maintain/set timers based on occurrences of delivery order events and delaying transmission of feedback messages using timers for wind energy production is disclosed.

In embodiments, a system for data communication, using a computer vision system, between nodes having the ability to maintain/set timers based on occurrences of delivery order events and delaying modification of congestion window size based on timers for wind energy production is disclosed.

In embodiments, a system for data communication, using a computer vision system, between nodes having the ability to maintain/set timers based on occurrences of delivery order events, delaying modification of congestion window size based on timers, and cancelling modification of congestion window size when receiving a feedback message indicating successful delivery for wind energy production is disclosed.

In embodiments, a system for data communication, using a computer vision system, between nodes having the ability to configure a new connection using maintained data characterizing a current/previous connection for wind energy production is disclosed.

In embodiments, a system for data communication, using a computer vision system, between nodes having the ability to configure a new connection using maintained data characterizing an error rate of a current/previous connection for wind energy production is disclosed.

In embodiments, a system for data communication, using a computer vision system, between nodes having the ability to configure a new connection using maintained data characterizing a timing variability of a current/previous connection for wind energy production is disclosed.

In embodiments, a system for data communication, using a computer vision system, between nodes having the ability to configure a new connection using maintained data characterizing bandwidth of a current/previous connection for wind energy production is disclosed.

In embodiments, a system for data communication, using a computer vision system, between nodes having the ability to configure a new connection using maintained data characterizing round trip time of a current/previous connection for wind energy production is disclosed.

In embodiments, a system for data communication, using a computer vision system, between nodes having the ability to configure a new connection using maintained data characterizing communication control parameters of a current/previous connection for wind energy production is disclosed.

In embodiments, a system for data communication, using a computer vision system, between nodes having the ability to configure new connection using maintained data characterizing forward error correction parameters of a current/previous connection for wind energy production is disclosed.

In embodiments, a system for data communication, using a computer vision system, between nodes having a data store for maintaining data characterizing one or more current or previous data communication connections and a connection initiation module for initiating new data communication connections based on maintained data for wind energy production is disclosed.

In embodiments, a system for data communication, using a computer vision system, between nodes having the ability to transmit a first subset of data messages over a lower latency data path and a second subset of messages over a higher latency data path for wind energy production is disclosed.

In embodiments, a system for data communication, using a computer vision system, between nodes having the ability to transmit a first subset of data messages that are time critical over a lower latency data path and a second subset of messages over a higher latency data path for wind energy production is disclosed.

In embodiments, a system for data communication, using a computer vision system, between nodes having the ability to transmit a first initial subset of data messages over a lower latency data path and a second subset of messages that are subsequently available over a higher latency data path for wind energy production is disclosed.

In embodiments, a system for data communication, using a computer vision system, between nodes having the ability to transmit a first subset of acknowledgment messages over a lower latency data path and a second subset of data messages over a higher latency data path for wind energy production is disclosed.

In embodiments, a system for data communication, using a computer vision system, between nodes having the ability to transmit a first subset of supplemental/redundancy data messages over a lower latency data path and a second subset of data messages over a higher latency data path for wind energy production is disclosed.

In embodiments, a system for data communication, using a computer vision system, between nodes having a degree of redundancy associated with each message that is based on message position in the transmission order for wind energy production is disclosed.

In embodiments, a system for data communication, using a computer vision system, between nodes having a degree of redundancy associated with each message that increases as the position of the messages is non-decreasing for wind energy production is disclosed.

In embodiments, a system for data communication, using a computer vision system, between nodes having a degree of redundancy associated with each message that is based on message position in the transmission order and in response to receiving feedback messages for wind energy production is disclosed.

In embodiments, a system for data communication, using a computer vision system, between nodes having a degree of redundancy associated with each message that is based on message position in the transmission order and in response to receiving feedback messages, and adding or removing redundancy messages from the queue based on the feedback messages for wind energy production is disclosed.

In embodiments, a system for data communication, using a computer vision system, between nodes having the ability to adjust the number of messages sent over each of multiple different data paths with different communication protocols if it is determined that a data path is altering flow of messages for wind energy production is disclosed.

In embodiments, a system for data communication, using a computer vision system, between nodes having the ability to adjust the number of messages sent over each of multiple different data paths with different communication protocols if it is determined that a data path is altering flow of messages initial division based on previous communication connections for wind energy production is disclosed.

In embodiments, a system for data communication, using a computer vision system, between nodes having the ability to modify/add/remove redundancy information associated with encoded data as it travels from node to node via channels based on channel characteristics for wind energy production is disclosed.

In embodiments, a system for data communication, using a computer vision system, between nodes having the ability to send FEC packets at an estimated rate of loss events (isolated packet loss or burst of consecutive packets) for wind energy production is disclosed.

In embodiments, a system for data communication, using a computer vision system, between nodes having combined coding, TCP, and pacing of packet transmissions for wind energy production is disclosed.

In embodiments, a system for data communication, using a computer vision system, between nodes having a forward error correction code construction that interleaves groups of message packets and parity packets and has coding across overlapping groups of message packets for wind energy production is disclosed.

In embodiments, a system for data communication, using a computer vision system, between nodes having a variant of TCP that combines delay-based backoff with a stable window increase function for wind energy production is disclosed.

In embodiments, a system for data collection, using a computer vision system, in an industrial environment having the use of an analog cross point switch for collecting variable groups of analog sensor inputs for hydroelectric energy production is disclosed.

In embodiments, a system for data collection, using a computer vision system, in an industrial environment having up front signal conditioning on a multiplexer for improved signal-to-noise ratio for hydroelectric energy production is disclosed.

In embodiments, a system for data collection, using a computer vision system, in an industrial environment having multiplexer continuous monitoring alarming features for hydroelectric energy production is disclosed.

In embodiments, a system for data collection, using a computer vision system, in an industrial environment having the use of distributed CPLD chips with dedicated bus for logic control of multiple MUX and data acquisition sections for hydroelectric energy production is disclosed.

In embodiments, a system for data collection, using a computer vision system, in an industrial environment having high-amperage input capability using solid state relays and design topology for hydroelectric energy production is disclosed.

In embodiments, a system for data collection, using a computer vision system, in an industrial environment having power-down ability of at least one of an analog sensor channel and a component board for hydroelectric energy production is disclosed.

In embodiments, a system for data collection, using a computer vision system, in an industrial environment having unique electrostatic protection for trigger and vibration inputs for hydroelectric energy production is disclosed.

In embodiments, a system for data collection, using a computer vision system, in an industrial environment having precise voltage reference for A/D zero reference for hydroelectric energy production is disclosed.

In embodiments, a system for data collection, using a computer vision system, in an industrial environment having a phase-lock loop band-pass tracking filter for obtaining slow-speed RPMs and phase information for hydroelectric energy production is disclosed.

In embodiments, a system for data collection, using a computer vision system, in an industrial environment having digital derivation of phase relative to input and trigger channels using on-board timers for hydroelectric energy production is disclosed.

In embodiments, a system for data collection, using a computer vision system, in an industrial environment having a peak-detector for auto-scaling that is routed into a separate analog-to-digital converter for peak detection for hydroelectric energy production is disclosed.

In embodiments, a system for data collection, using a computer vision system, in an industrial environment having routing of a trigger channel that is either raw or buffered into other analog channels for hydroelectric energy production is disclosed.

In embodiments, a system for data collection, using a computer vision system, in an industrial environment having the use of higher input oversampling for delta-sigma A/D for lower sampling rate outputs to minimize AA filter requirements for hydroelectric energy production is disclosed.

In embodiments, a system for data collection, using a computer vision system, in an industrial environment having the use of a CPLD as a clock-divider for a delta-sigma analog-to-digital converter to achieve lower sampling rates without the need for digital resampling for hydroelectric energy production is disclosed.

In embodiments, a system for data collection, using a computer vision system, in an industrial environment having long blocks of data at a high-sampling rate as opposed to multiple sets of data taken at different sampling rates for hydroelectric energy production is disclosed.

In embodiments, a system for data collection, using a computer vision system, in an industrial environment having storage of calibration data with maintenance history on-board card set for hydroelectric energy production is disclosed.

In embodiments, a system for data collection, using a computer vision system, in an industrial environment having a rapid route creation capability using hierarchical templates for hydroelectric energy production is disclosed.

In embodiments, a system for data collection, using a computer vision system, in an industrial environment having intelligent management of data collection bands for hydroelectric energy production is disclosed.

In embodiments, a system for data collection, using a computer vision system, in an industrial environment having a neural net expert system using intelligent management of data collection bands for hydroelectric energy production is disclosed.

In embodiments, a system for data collection, using a computer vision system, in an industrial environment having use of a database hierarchy in sensor data analysis for hydroelectric energy production is disclosed.

In embodiments, a system for data collection, using a computer vision system, in an industrial environment having an expert system GUI graphical approach to defining intelligent data collection bands and diagnoses for the expert system for hydroelectric energy production is disclosed.

In embodiments, a system for data collection, using a computer vision system, in an industrial environment having a graphical approach for back-calculation definition for hydroelectric energy production is disclosed.

In embodiments, a system for data collection, using a computer vision system, in an industrial environment having proposed bearing analysis methods for hydroelectric energy production is disclosed.

In embodiments, a system for data collection, using a computer vision system, in an industrial environment having torsional vibration detection/analysis utilizing transitory signal analysis for hydroelectric energy production is disclosed.

In embodiments, a system for data collection, using a computer vision system, in an industrial environment having improved integration using both analog and digital methods for hydroelectric energy production is disclosed.

In embodiments, a system for data collection, using a computer vision system, in an industrial environment having adaptive scheduling techniques for continuous monitoring of analog data in a local environment for hydroelectric energy production is disclosed.

In embodiments, a system for data collection, using a computer vision system, in an industrial environment having data acquisition parking features for hydroelectric energy production is disclosed.

In embodiments, a system for data collection, using a computer vision system, in an industrial environment having a self-sufficient data acquisition box for hydroelectric energy production is disclosed.

In embodiments, a system for data collection, using a computer vision system, in an industrial environment having SD card storage for hydroelectric energy production is disclosed.

In embodiments, a system for data collection, using a computer vision system, in an industrial environment having extended onboard statistical capabilities for continuous monitoring for hydroelectric energy production is disclosed.

In embodiments, a system for data collection, using a computer vision system, in an industrial environment having the use of ambient, local and vibration noise for prediction for hydroelectric energy production is disclosed.

In embodiments, a system for data collection, using a computer vision system, in an industrial environment having smart route changes route based on incoming data or alarms enable simultaneous dynamic data for analysis or correlation for hydroelectric energy production is disclosed.

In embodiments, a system for data collection, using a computer vision system, in an industrial environment having smart ODS and transfer functions for hydroelectric energy production is disclosed.

In embodiments, a system for data collection, using a computer vision system, in an industrial environment having hierarchical multiplexer for hydroelectric energy production is disclosed.

In embodiments, a system for data collection, using a computer vision system, in an industrial environment having identification sensor overload for hydroelectric energy production is disclosed.

In embodiments, a system for data collection, using a computer vision system, in an industrial environment having RF identification and an inclinometer for hydroelectric energy production is disclosed.

In embodiments, a system for data collection, using a computer vision system, in an industrial environment having continuous ultrasonic monitoring for hydroelectric energy production is disclosed.

In embodiments, a system for data collection, using a computer vision system, in an industrial environment having cloud-based, machine pattern recognition based on fusion of remote, analog industrial sensors for hydroelectric energy production is disclosed.

In embodiments, a system for data collection, using a computer vision system, in an industrial environment having cloud-based, machine pattern analysis of state information from multiple analog industrial sensors to provide anticipated state information for an industrial system for hydroelectric energy production is disclosed.

In embodiments, a system for data collection, using a computer vision system, in an industrial environment having cloud-based policy automation engine for IoT, with creation, deployment and management of IoT devices for hydroelectric energy production is disclosed.

In embodiments, a system for data collection, using a computer vision system, in an industrial environment having on-device sensor fusion and data storage for industrial IoT devices for hydroelectric energy production is disclosed.

In embodiments, a system for data collection, using a computer vision system, in an industrial environment having a self-organizing data marketplace for industrial IoT data for hydroelectric energy production is disclosed.

In embodiments, a system for data collection, using a computer vision system, in an industrial environment having self-organization of data pools based on utilization and/or yield metrics for hydroelectric energy production is disclosed.

In embodiments, a system for data collection, using a computer vision system, in an industrial environment having training AI models based on industry-specific feedback for hydroelectric energy production is disclosed.

In embodiments, a system for data collection, using a computer vision system, in an industrial environment having a self-organized swarm of industrial data collectors for hydroelectric energy production is disclosed.

In embodiments, a system for data collection, using a computer vision system, in an industrial environment having an IoT distributed ledger for hydroelectric energy production is disclosed.

In embodiments, a system for data collection, using a computer vision system, in an industrial environment having a self-organizing collector for hydroelectric energy production is disclosed.

In embodiments, a system for data collection, using a computer vision system, in an industrial environment having a network-sensitive collector for hydroelectric energy production is disclosed.

In embodiments, a system for data collection, using a computer vision system, in an industrial environment having a remotely organized collector for hydroelectric energy production is disclosed.

In embodiments, a system for data collection, using a computer vision system, in an industrial environment having a self-organizing storage for a multi-sensor data collector for hydroelectric energy production is disclosed.

In embodiments, a system for data collection, using a computer vision system, in an industrial environment having a self-organizing network coding for multi-sensor data network for hydroelectric energy production is disclosed.

In embodiments, a system for data collection, using a computer vision system, in an industrial environment having a wearable haptic user interface for an industrial sensor data collector, with vibration, heat, electrical and/or sound outputs for hydroelectric energy production is disclosed.

In embodiments, a system for data collection, using a computer vision system, in an industrial environment having heat maps displaying collection data for AR/VR for hydroelectric energy production is disclosed.

In embodiments, a system for data collection, using a computer vision system, in an industrial environment having automatically tuned AR/VR visualization of data collected by a data collector for hydroelectric energy production is disclosed.

In embodiments, a system for data collection, using a computer vision system, in an industrial environment having an IoT platform for hydroelectric energy production is disclosed.

In embodiments, a system for data collection, using a computer vision system, in an industrial environment having an IoT data adapter for receiving data inputs and establishing a connection with one or more available IoT cloud platforms to publish the data for hydroelectric energy production is disclosed.

In embodiments, a system for data collection, using a computer vision system, in an industrial environment having a condition detector for detecting conditions related to connect attempts made by the IoT data adapter to one or more IoT cloud platforms for hydroelectric energy production is disclosed.

In embodiments, a system for data collection, using a computer vision system, in an industrial environment having an IoT data adapter with an adaptation engine for hydroelectric energy production is disclosed.

In embodiments, a system for data collection, using a computer vision system, in an industrial environment having the use of machine learning to prepare a data packet or stream for hydroelectric energy production is disclosed.

In embodiments, a system for data collection, using a computer vision system, in an industrial environment having a data marketplace that provides a pool of available cloud networking platforms for hydroelectric energy production is disclosed.

In embodiments, a system for data collection, using a computer vision system, in an industrial environment having a messaging utility that provides a cloud platform user interface with a message indicating the availability of a new data source and data source integration and usage instructions for hydroelectric energy production is disclosed.

In embodiments, a system for data communication, using a computer vision system, between nodes having the ability to maintain a first and second transmission limit based on received rate of arrival and success of delivery feedback messages, and limiting transmission of messages based on the transmission limits for hydroelectric energy production is disclosed.

In embodiments, a system for data communication, using a computer vision system, between nodes having the ability to limit transmission of further messages not yet acknowledged as successfully delivered according to the window size for hydroelectric energy production is disclosed.

In embodiments, a system for data communication, using a computer vision system, between nodes having the ability to maintain an estimate of a rate of loss events and use it to adjust the rate of redundancy messages for hydroelectric energy production is disclosed.

In embodiments, a system for data communication, using a computer vision system, between nodes having an estimated rate of loss events where the error correction code used to determine redundancy messages chosen is based on the estimated rate of loss events for hydroelectric energy production is disclosed.

In embodiments, a system for data communication, using a computer vision system, between nodes having the ability to apply forward error correction based on messages received describing channel characteristics for hydroelectric energy production is disclosed.

In embodiments, a system for data communication, using a computer vision system, between nodes having the ability to maintain/set timers based on occurrences of delivery order events and delaying transmission of feedback messages using timers for hydroelectric energy production is disclosed.

In embodiments, a system for data communication, using a computer vision system, between nodes having the ability to maintain/set timers based on occurrences of delivery order events and delaying modification of congestion window size based on timers for hydroelectric energy production is disclosed.

In embodiments, a system for data communication, using a computer vision system, between nodes having the ability to maintain/set timers based on occurrences of delivery order events, delaying modification of congestion window size based on timers, and cancelling modification of congestion window size when receiving a feedback message indicating successful delivery for hydroelectric energy production is disclosed.

In embodiments, a system for data communication, using a computer vision system, between nodes having the ability to configure a new connection using maintained data characterizing a current/previous connection for hydroelectric energy production is disclosed.

In embodiments, a system for data communication, using a computer vision system, between nodes having the ability to configure a new connection using maintained data characterizing an error rate of a current/previous connection for hydroelectric energy production is disclosed.

**In** embodiments, a system for data communication, using a computer vision system, between nodes having the ability to configure a new connection using maintained data characterizing a timing variability of a current/previous connection for hydroelectric energy production is disclosed.

**In** embodiments, a system for data communication, using a computer vision system, between nodes having the ability to configure a new connection using maintained data characterizing bandwidth of a current/previous connection for hydroelectric energy production is disclosed.

In embodiments, a system for data communication, using a computer vision system, between nodes having the ability to configure a new connection using maintained data characterizing round trip time of a current/previous connection for hydroelectric energy production is disclosed.

In embodiments, a system for data communication, using a computer vision system, between nodes having the ability to configure a new connection using maintained data characterizing communication control parameters of a current/previous connection for hydroelectric energy production is disclosed.

In embodiments, a system for data communication, using a computer vision system, between nodes having the ability to configure new connection using maintained data characterizing forward error correction parameters of a current/previous connection for hydroelectric energy production is disclosed.

In embodiments, a system for data communication, using a computer vision system, between nodes having a data store for maintaining data characterizing one or more current or previous data communication connections and a connection initiation module for initiating new data communication connections based on maintained data for hydroelectric energy production is disclosed.

In embodiments, a system for data communication, using a computer vision system, between nodes having the ability to transmit a first subset of data messages over a lower latency data path and a second subset of messages over a higher latency data path for hydroelectric energy production is disclosed.

In embodiments, a system for data communication, using a computer vision system, between nodes having the ability to transmit a first subset of data messages that are time critical over a lower latency data path and a second subset of messages over a higher latency data path for hydroelectric energy production is disclosed.

In embodiments, a system for data communication, using a computer vision system, between nodes having the ability to transmit a first initial subset of data messages over a lower latency data path and a second subset of messages that are subsequently available over a higher latency data path for hydroelectric energy production is disclosed.

In embodiments, a system for data communication, using a computer vision system, between nodes having the ability to transmit a first subset of acknowledgment messages over a lower latency data path and a second subset of data messages over a higher latency data path for hydroelectric energy production is disclosed.

In embodiments, a system for data communication, using a computer vision system, between nodes having the ability to transmit a first subset of supplemental/redundancy data messages over a lower latency data path and a second subset of data messages over a higher latency data path for hydroelectric energy production is disclosed.

In embodiments, a system for data communication, using a computer vision system, between nodes having a degree of redundancy associated with each message that is based on message position in the transmission order for hydroelectric energy production is disclosed.

In embodiments, a system for data communication, using a computer vision system, between nodes having a degree of redundancy associated with each message that increases as the position of the messages is non-decreasing for hydroelectric energy production is disclosed.

In embodiments, a system for data communication, using a computer vision system, between nodes having a degree of redundancy associated with each message that is based on message position in the transmission order and in response to receiving feedback messages for hydroelectric energy production is disclosed.

In embodiments, a system for data communication, using a computer vision system, between nodes having a degree of redundancy associated with each message that is based on message position in the transmission order and in response to receiving feedback messages, and adding or removing redundancy messages from the queue based on the feedback messages for hydroelectric energy production is disclosed.

In embodiments, a system for data communication, using a computer vision system, between nodes having the ability to adjust the number of messages sent over each of multiple different data paths with different communication protocols if it is determined that a data path is altering flow of messages for hydroelectric energy production is disclosed.

In embodiments, a system for data communication, using a computer vision system, between nodes having the ability to adjust the number of messages sent over each of multiple different data paths with different communication protocols if it is determined that a data path is altering flow of messages initial division based on previous communication connections for hydroelectric energy production is disclosed.

In embodiments, a system for data communication, using a computer vision system, between nodes having the ability to modify/add/remove redundancy information associated with encoded data as it travels from node to node via channels based on channel characteristics for hydroelectric energy production is disclosed.

In embodiments, a system for data communication, using a computer vision system, between nodes having the ability to send FEC packets at an estimated rate of loss events (isolated packet loss or burst of consecutive packets) for hydroelectric energy production is disclosed.

In embodiments, a system for data communication, using a computer vision system, between nodes having combined coding, TCP, and pacing of packet transmissions for hydroelectric energy production is disclosed.

In embodiments, a system for data communication, using a computer vision system, between nodes having a forward error correction code construction that interleaves groups of message packets and parity packets and has coding across overlapping groups of message packets for hydroelectric energy production is disclosed.

In embodiments, a system for data communication, using a computer vision system, between nodes having a variant of TCP that combines delay-based back-off with a stable window increase function for hydroelectric energy production is disclosed.

In embodiments, a system for data collection, using a computer vision system, in an industrial environment having the use of an analog cross point switch for collecting variable groups of analog sensor inputs for nuclear energy production is disclosed.

In embodiments, a system for data collection, using a computer vision system, in an industrial environment having up front signal conditioning on a multiplexer for improved signal-to-noise ratio for nuclear energy production is disclosed.

In embodiments, a system for data collection, using a computer vision system, in an industrial environment having multiplexer continuous monitoring alarming features for nuclear energy production is disclosed.

In embodiments, a system for data collection, using a computer vision system, in an industrial environment having the use of distributed CPLD chips with dedicated bus for logic control of multiple MUX and data acquisition sections for nuclear energy production is disclosed.

In embodiments, a system for data collection, using a computer vision system, in an industrial environment having high-amperage input capability using solid state relays and design topology for nuclear energy production is disclosed.

In embodiments, a system for data collection, using a computer vision system, in an industrial environment having power-down ability of at least one of an analog sensor channel and a component board for nuclear energy production is disclosed.

In embodiments, a system for data collection, using a computer vision system, in an industrial environment having unique electrostatic protection for trigger and vibration inputs for nuclear energy production is disclosed.

In embodiments, a system for data collection, using a computer vision system, in an industrial environment having precise voltage reference for A/D zero reference for nuclear energy production is disclosed.

In embodiments, a system for data collection, using a computer vision system, in an industrial environment having a phase-lock loop band-pass tracking filter for obtaining slow-speed RPMs and phase information for nuclear energy production is disclosed.

In embodiments, a system for data collection, using a computer vision system, in an industrial environment having digital derivation of phase relative to input and trigger channels using on-board timers for nuclear energy production is disclosed.

In embodiments, a system for data collection, using a computer vision system, in an industrial environment having a peak-detector for auto-scaling that is routed into a separate analog-to-digital converter for peak detection for nuclear energy production is disclosed.

In embodiments, a system for data collection, using a computer vision system, in an industrial environment having routing of a trigger channel that is either raw or buffered into other analog channels for nuclear energy production is disclosed.

In embodiments, a system for data collection, using a computer vision system, in an industrial environment having the use of higher input oversampling for delta-sigma A/D for lower sampling rate outputs to minimize AA filter requirements for nuclear energy production is disclosed.

In embodiments, a system for data collection, using a computer vision system, in an industrial environment having the use of a CPLD as a clock-divider for a delta-sigma analog-to-digital converter to achieve lower sampling rates without the need for digital resampling for nuclear energy production is disclosed.

In embodiments, a system for data collection, using a computer vision system, in an industrial environment having long blocks of data at a high-sampling rate as opposed to multiple sets of data taken at different sampling rates for nuclear energy production is disclosed.

In embodiments, a system for data collection, using a computer vision system, in an industrial environment having storage of calibration data with maintenance history on-board card set for nuclear energy production is disclosed.

In embodiments, a system for data collection, using a computer vision system, in an industrial environment having a rapid route creation capability using hierarchical templates for nuclear energy production is disclosed.

In embodiments, a system for data collection, using a computer vision system, in an industrial environment having intelligent management of data collection bands for nuclear energy production is disclosed.

In embodiments, a system for data collection, using a computer vision system, in an industrial environment having a neural net expert system using intelligent management of data collection bands for nuclear energy production is disclosed.

In embodiments, a system for data collection, using a computer vision system, in an industrial environment having use of a database hierarchy in sensor data analysis for nuclear energy production is disclosed.

In embodiments, a system for data collection, using a computer vision system, in an industrial environment having an expert system GUI graphical approach to defining intelligent data collection bands and diagnoses for the expert system for nuclear energy production is disclosed.

In embodiments, a system for data collection, using a computer vision system, in an industrial environment having a graphical approach for back-calculation definition for nuclear energy production is disclosed.

In embodiments, a system for data collection, using a computer vision system, in an industrial environment having proposed bearing analysis methods for nuclear energy production is disclosed.

In embodiments, a system for data collection, using a computer vision system, in an industrial environment having torsional vibration detection/analysis utilizing transitory signal analysis for nuclear energy production is disclosed.

In embodiments, a system for data collection, using a computer vision system, in an industrial environment having improved integration using both analog and digital methods for nuclear energy production is disclosed.

In embodiments, a system for data collection, using a computer vision system, in an industrial environment having adaptive scheduling techniques for continuous monitoring of analog data in a local environment for nuclear energy production is disclosed.

In embodiments, a system for data collection, using a computer vision system, in an industrial environment having data acquisition parking features for nuclear energy production is disclosed.

In embodiments, a system for data collection, using a computer vision system, in an industrial environment having a self-sufficient data acquisition box for nuclear energy production is disclosed.

In embodiments, a system for data collection, using a computer vision system, in an industrial environment having SD card storage for nuclear energy production is disclosed.

In embodiments, a system for data collection, using a computer vision system, in an industrial environment having extended onboard statistical capabilities for continuous monitoring for nuclear energy production is disclosed.

In embodiments, a system for data collection, using a computer vision system, in an industrial environment having the use of ambient, local and vibration noise for prediction for nuclear energy production is disclosed.

In embodiments, a system for data collection, using a computer vision system, in an industrial environment having smart route changes route based on incoming data or alarms enable simultaneous dynamic data for analysis or correlation for nuclear energy production is disclosed.

In embodiments, a system for data collection, using a computer vision system, in an industrial environment having smart ODS and transfer functions for nuclear energy production is disclosed.

In embodiments, a system for data collection, using a computer vision system, in an industrial environment having hierarchical multiplexer for nuclear energy production is disclosed.

In embodiments, a system for data collection, using a computer vision system, in an industrial environment having identification sensor overload for nuclear energy production is disclosed.

In embodiments, a system for data collection, using a computer vision system, in an industrial environment having RF identification and an inclinometer for nuclear energy production is disclosed.

In embodiments, a system for data collection, using a computer vision system, in an industrial environment having continuous ultrasonic monitoring for nuclear energy production is disclosed.

In embodiments, a system for data collection, using a computer vision system, in an industrial environment having cloud-based, machine pattern recognition based on fusion of remote, analog industrial sensors for nuclear energy production is disclosed.

In embodiments, a system for data collection, using a computer vision system, in an industrial environment having cloud-based, machine pattern analysis of state information from multiple analog industrial sensors to provide anticipated state information for an industrial system for nuclear energy production is disclosed.

In embodiments, a system for data collection, using a computer vision system, in an industrial environment having cloud-based policy automation engine for IoT, with creation, deployment and management of IoT devices for nuclear energy production is disclosed.

In embodiments, a system for data collection, using a computer vision system, in an industrial environment having on-device sensor fusion and data storage for industrial IoT devices for nuclear energy production is disclosed.

In embodiments, a system for data collection, using a computer vision system, in an industrial environment having a self-organizing data marketplace for industrial IoT data for nuclear energy production is disclosed.

In embodiments, a system for data collection, using a computer vision system, in an industrial environment having self-organization of data pools based on utilization and/or yield metrics for nuclear energy production is disclosed.

In embodiments, a system for data collection, using a computer vision system, in an industrial environment having training AI models based on industry-specific feedback for nuclear energy production is disclosed.

In embodiments, a system for data collection, using a computer vision system, in an industrial environment having a self-organized swarm of industrial data collectors for nuclear energy production is disclosed.

In embodiments, a system for data collection, using a computer vision system, in an industrial environment having an IoT distributed ledger for nuclear energy production is disclosed.

In embodiments, a system for data collection, using a computer vision system, in an industrial environment having a self-organizing collector for nuclear energy production is disclosed.

In embodiments, a system for data collection, using a computer vision system, in an industrial environment having a network-sensitive collector for nuclear energy production is disclosed.

In embodiments, a system for data collection, using a computer vision system, in an industrial environment having a remotely organized collector for nuclear energy production is disclosed.

In embodiments, a system for data collection, using a computer vision system, in an industrial environment having a self-organizing storage for a multi-sensor data collector for nuclear energy production is disclosed.

In embodiments, a system for data collection, using a computer vision system, in an industrial environment having a self-organizing network coding for multi-sensor data network for nuclear energy production is disclosed.

In embodiments, a system for data collection, using a computer vision system, in an industrial environment having a wearable haptic user interface for an industrial sensor data collector, with vibration, heat, electrical and/or sound outputs for nuclear energy production is disclosed.

In embodiments, a system for data collection, using a computer vision system, in an industrial environment having heat maps displaying collection data for AR/VR for nuclear energy production is disclosed.

In embodiments, a system for data collection, using a computer vision system, in an industrial environment having automatically tuned AR/VR visualization of data collected by a data collector for nuclear energy production is disclosed.

In embodiments, a system for data collection, using a computer vision system, in an industrial environment having an IoT platform for nuclear energy production is disclosed.

In embodiments, a system for data collection, using a computer vision system, in an industrial environment having an IoT data adapter for receiving data inputs and establishing a connection with one or more available IoT cloud platforms to publish the data for nuclear energy production is disclosed.

In embodiments, a system for data collection, using a computer vision system, in an industrial environment having a condition detector for detecting conditions related to connect attempts made by the IoT data adapter to one or more IoT cloud platforms for nuclear energy production is disclosed.

In embodiments, a system for data collection, using a computer vision system, in an industrial environment having an IoT data adapter with an adaptation engine for nuclear energy production is disclosed.

In embodiments, a system for data collection, using a computer vision system, in an industrial environment having the use of machine learning to prepare a data packet or stream for nuclear energy production is disclosed.

In embodiments, a system for data collection, using a computer vision system, in an industrial environment having a data marketplace that provides a pool of available cloud networking platforms for nuclear energy production is disclosed.

In embodiments, a system for data collection, using a computer vision system, in an industrial environment having a messaging utility that provides a cloud platform user interface with a message indicating the availability of a new data source and data source integration and usage instructions for nuclear energy production is disclosed.

In embodiments, a system for data communication, using a computer vision system, between nodes having the ability to maintain a first and second transmission limit based on received rate of arrival and success of delivery feedback messages, and limiting transmission of messages based on the transmission limits for nuclear energy production is disclosed.

In embodiments, a system for data communication, using a computer vision system, between nodes having the ability to limit transmission of further messages not yet acknowledged as successfully delivered according to the window size for nuclear energy production is disclosed.

In embodiments, a system for data communication, using a computer vision system, between nodes having the ability to maintain an estimate of a rate of loss events and use it to adjust the rate of redundancy messages for nuclear energy production is disclosed.

In embodiments, a system for data communication, using a computer vision system, between nodes having an estimated rate of loss events where the error correction code used to determine redundancy messages chosen is based on the estimated rate of loss events for nuclear energy production is disclosed.

In embodiments, a system for data communication, using a computer vision system, between nodes having the ability to apply forward error correction based on messages received describing channel characteristics for nuclear energy production is disclosed.

In embodiments, a system for data communication, using a computer vision system, between nodes having the ability to maintain/set timers based on occurrences of delivery order events and delaying transmission of feedback messages using timers for nuclear energy production is disclosed.

In embodiments, a system for data communication, using a computer vision system, between nodes having the ability to maintain/set timers based on occurrences of delivery order events and delaying modification of congestion window size based on timers for nuclear energy production is disclosed.

In embodiments, a system for data communication, using a computer vision system, between nodes having the ability to maintain/set timers based on occurrences of delivery order events, delaying modification of congestion window size based on timers, and cancelling modification of congestion window size when receiving a feedback message indicating successful delivery for nuclear energy production is disclosed.

In embodiments, a system for data communication, using a computer vision system, between nodes having the ability to configure a new connection using maintained data characterizing a current/previous connection for nuclear energy production is disclosed.

In embodiments, a system for data communication, using a computer vision system, between nodes having the ability to configure a new connection using maintained data characterizing an error rate of a current/previous connection for nuclear energy production is disclosed.

In embodiments, a system for data communication, using a computer vision system, between nodes having the ability to configure a new connection using maintained data characterizing a timing variability of a current/previous connection for nuclear energy production is disclosed.

In embodiments, a system for data communication, using a computer vision system, between nodes having the ability to configure a new connection using maintained data characterizing bandwidth of a current/previous connection for nuclear energy production is disclosed.

In embodiments, a system for data communication, using a computer vision system, between nodes having the ability to configure a new connection using maintained data characterizing round trip time of a current/previous connection for nuclear energy production is disclosed.

In embodiments, a system for data communication, using a computer vision system, between nodes having the ability to configure a new connection using maintained data characterizing communication control parameters of a current/previous connection for nuclear energy production is disclosed.

In embodiments, a system for data communication, using a computer vision system, between nodes having the ability to configure new connection using maintained data characterizing forward error correction parameters of a current/previous connection for nuclear energy production is disclosed.

In embodiments, a system for data communication, using a computer vision system, between nodes having a data store for maintaining data characterizing one or more current or previous data communication connections and a connection initiation module for initiating new data communication connections based on maintained data for nuclear energy production is disclosed.

In embodiments, a system for data communication, using a computer vision system, between nodes having the ability to transmit a first subset of data messages over a lower latency data path and a second subset of messages over a higher latency data path for nuclear energy production is disclosed.

In embodiments, a system for data communication, using a computer vision system, between nodes having the ability to transmit a first subset of data messages that are time critical over a lower latency data path and a second subset of messages over a higher latency data path for nuclear energy production is disclosed.

In embodiments, a system for data communication, using a computer vision system, between nodes having the ability to transmit a first initial subset of data messages over a lower latency data path and a second subset of messages that are subsequently available over a higher latency data path for nuclear energy production is disclosed.

In embodiments, a system for data communication, using a computer vision system, between nodes having the ability to transmit a first subset of acknowledgment messages over a lower latency data path and a second subset of data messages over a higher latency data path for nuclear energy production is disclosed.

In embodiments, a system for data communication, using a computer vision system, between nodes having the ability to transmit a first subset of supplemental/redundancy data messages over a lower latency data path and a second subset of data messages over a higher latency data path for nuclear energy production is disclosed.

In embodiments, a system for data communication, using a computer vision system, between nodes having a degree of redundancy associated with each message that is based on message position in the transmission order for nuclear energy production is disclosed.

In embodiments, a system for data communication, using a computer vision system, between nodes having a degree of redundancy associated with each message that increases as the position of the messages is non-decreasing for nuclear energy production is disclosed.

In embodiments, a system for data communication, using a computer vision system, between nodes having a degree of redundancy associated with each message that is based on message position in the transmission order and in response to receiving feedback messages for nuclear energy production is disclosed.

In embodiments, a system for data communication, using a computer vision system, between nodes having a degree of redundancy associated with each message that is based on message position in the transmission order and in response to receiving feedback messages, and adding or removing redundancy messages from the queue based on the feedback messages for nuclear energy production is disclosed.

In embodiments, a system for data communication, using a computer vision system, between nodes having the ability to adjust the number of messages sent over each of multiple different data paths with different communication protocols if it is determined that a data path is altering flow of messages for nuclear energy production is disclosed.

In embodiments, a system for data communication, using a computer vision system, between nodes having the ability to adjust the number of messages sent over each of multiple different data paths with different communication protocols if it is determined that a data path is altering flow of messages initial division based on previous communication connections for nuclear energy production is disclosed.

In embodiments, a system for data communication, using a computer vision system, between nodes having the ability to modify/add/remove redundancy information associated with encoded data as it travels from node to node via channels based on channel characteristics for nuclear energy production is disclosed.

In embodiments, a system for data communication, using a computer vision system, between nodes having the ability to send FEC packets at an estimated rate of loss events (isolated packet loss or burst of consecutive packets) for nuclear energy production is disclosed.

In embodiments, a system for data communication, using a computer vision system, between nodes having combined coding, TCP, and pacing of packet transmissions for nuclear energy production is disclosed.

In embodiments, a system for data communication, using a computer vision system, between nodes having a forward error correction code construction that interleaves groups of message packets and parity packets and has coding across overlapping groups of message packets for nuclear energy production is disclosed.

In embodiments, a system for data communication, using a computer vision system, between nodes having a variant of TCP that combines delay-based backoff with a stable window increase function for nuclear energy production is disclosed.

In embodiments, a system for data collection, using a computer vision system, in an industrial environment having the use of an analog cross point switch for collecting variable groups of analog sensor inputs for oil drilling is disclosed.

In embodiments, a system for data collection, using a computer vision system, in an industrial environment having up front signal conditioning on a multiplexer for improved signal-to-noise ratio for oil drilling is disclosed.

In embodiments, a system for data collection, using a computer vision system, in an industrial environment having multiplexer continuous monitoring alarming features for oil drilling is disclosed.

In embodiments, a system for data collection, using a computer vision system, in an industrial environment having the use of distributed CPLD chips with dedicated bus for logic control of multiple MUX and data acquisition sections for oil drilling is disclosed.

In embodiments, a system for data collection, using a computer vision system, in an industrial environment having high-amperage input capability using solid state relays and design topology for oil drilling is disclosed.

In embodiments, a system for data collection, using a computer vision system, in an industrial environment having power-down ability of at least one of an analog sensor channel and a component board for oil drilling is disclosed.

In embodiments, a system for data collection, using a computer vision system, in an industrial environment having unique electrostatic protection for trigger and vibration inputs for oil drilling is disclosed.

In embodiments, a system for data collection, using a computer vision system, in an industrial environment having precise voltage reference for A/D zero reference for oil drilling is disclosed.

In embodiments, a system for data collection, using a computer vision system, in an industrial environment having a phase-lock loop band-pass tracking filter for obtaining slow-speed RPMs and phase information for oil drilling is disclosed.

In embodiments, a system for data collection, using a computer vision system, in an industrial environment having digital derivation of phase relative to input and trigger channels using on-board timers for oil drilling is disclosed.

In embodiments, a system for data collection, using a computer vision system, in an industrial environment having a peak-detector for auto-scaling that is routed into a separate analog-to-digital converter for peak detection for oil drilling is disclosed.

In embodiments, a system for data collection, using a computer vision system, in an industrial environment having routing of a trigger channel that is either raw or buffered into other analog channels for oil drilling is disclosed.

In embodiments, a system for data collection, using a computer vision system, in an industrial environment having the use of higher input oversampling for delta-sigma A/D for lower sampling rate outputs to minimize AA filter requirements for oil drilling is disclosed.

In embodiments, a system for data collection, using a computer vision system, in an industrial environment having the use of a CPLD as a clock-divider for a delta-sigma analog-to-digital converter to achieve lower sampling rates without the need for digital resampling for oil drilling is disclosed.

In embodiments, a system for data collection, using a computer vision system, in an industrial environment having long blocks of data at a high-sampling rate as opposed to multiple sets of data taken at different sampling rates for oil drilling is disclosed.

In embodiments, a system for data collection, using a computer vision system, in an industrial environment having storage of calibration data with maintenance history on-board card set for oil drilling is disclosed.

In embodiments, a system for data collection, using a computer vision system, in an industrial environment having a rapid route creation capability using hierarchical templates for oil drilling is disclosed.

In embodiments, a system for data collection, using a computer vision system, in an industrial environment having intelligent management of data collection bands for oil drilling is disclosed.

In embodiments, a system for data collection, using a computer vision system, in an industrial environment having a neural net expert system using intelligent management of data collection bands for oil drilling is disclosed.

In embodiments, a system for data collection, using a computer vision system, in an industrial environment having use of a database hierarchy in sensor data analysis for oil drilling is disclosed.

In embodiments, a system for data collection, using a computer vision system, in an industrial environment having an expert system GUI graphical approach to defining intelligent data collection bands and diagnoses for the expert system for oil drilling is disclosed.

In embodiments, a system for data collection, using a computer vision system, in an industrial environment having a graphical approach for back-calculation definition for oil drilling is disclosed.

In embodiments, a system for data collection, using a computer vision system, in an industrial environment having proposed bearing analysis methods for oil drilling is disclosed.

In embodiments, a system for data collection, using a computer vision system, in an industrial environment having torsional vibration detection/analysis utilizing transitory signal analysis for oil drilling is disclosed.

In embodiments, a system for data collection, using a computer vision system, in an industrial environment having improved integration using both analog and digital methods for oil drilling is disclosed.

In embodiments, a system for data collection, using a computer vision system, in an industrial environment having adaptive scheduling techniques for continuous monitoring of analog data in a local environment for oil drilling is disclosed.

In embodiments, a system for data collection, using a computer vision system, in an industrial environment having data acquisition parking features for oil drilling is disclosed.

In embodiments, a system for data collection, using a computer vision system, in an industrial environment having a self-sufficient data acquisition box for oil drilling is disclosed.

In embodiments, a system for data collection, using a computer vision system, in an industrial environment having SD card storage for oil drilling is disclosed.

In embodiments, a system for data collection, using a computer vision system, in an industrial environment having extended onboard statistical capabilities for continuous monitoring for oil drilling is disclosed.

In embodiments, a system for data collection, using a computer vision system, in an industrial environment having the use of ambient, local and vibration noise for prediction for oil drilling is disclosed.

In embodiments, a system for data collection, using a computer vision system, in an industrial environment having smart route changes route based on incoming data or alarms enable simultaneous dynamic data for analysis or correlation for oil drilling is disclosed.

In embodiments, a system for data collection, using a computer vision system, in an industrial environment having smart ODS and transfer functions for oil drilling is disclosed.

In embodiments, a system for data collection, using a computer vision system, in an industrial environment having hierarchical multiplexer for oil drilling is disclosed.

In embodiments, a system for data collection, using a computer vision system, in an industrial environment having identification sensor overload for oil drilling is disclosed.

In embodiments, a system for data collection, using a computer vision system, in an industrial environment having RF identification and an inclinometer for oil drilling is disclosed.

In embodiments, a system for data collection, using a computer vision system, in an industrial environment having continuous ultrasonic monitoring for oil drilling is disclosed.

In embodiments, a system for data collection, using a computer vision system, in an industrial environment having cloud-based, machine pattern recognition based on fusion of remote, analog industrial sensors for oil drilling is disclosed.

In embodiments, a system for data collection, using a computer vision system, in an industrial environment having cloud-based, machine pattern analysis of state information from multiple analog industrial sensors to provide anticipated state information for an industrial system for oil drilling is disclosed.

In embodiments, a system for data collection, using a computer vision system, in an industrial environment having cloud-based policy automation engine for IoT, with creation, deployment and management of IoT devices for oil drilling is disclosed.

In embodiments, a system for data collection, using a computer vision system, in an industrial environment having on-device sensor fusion and data storage for industrial IoT devices for oil drilling is disclosed.

In embodiments, a system for data collection, using a computer vision system, in an industrial environment having a self-organizing data marketplace for industrial IoT data for oil drilling is disclosed.

In embodiments, a system for data collection, using a computer vision system, in an industrial environment having self-organization of data pools based on utilization and/or yield metrics for oil drilling is disclosed.

In embodiments, a system for data collection, using a computer vision system, in an industrial environment having training AI models based on industry-specific feedback for oil drilling is disclosed.

In embodiments, a system for data collection, using a computer vision system, in an industrial environment having a self-organized swarm of industrial data collectors for oil drilling is disclosed.

In embodiments, a system for data collection, using a computer vision system, in an industrial environment having an IoT distributed ledger for oil drilling is disclosed.

In embodiments, a system for data collection, using a computer vision system, in an industrial environment having a self-organizing collector for oil drilling is disclosed.

In embodiments, a system for data collection, using a computer vision system, in an industrial environment having a network-sensitive collector for oil drilling is disclosed.

In embodiments, a system for data collection, using a computer vision system, in an industrial environment having a remotely organized collector for oil drilling is disclosed.

In embodiments, a system for data collection, using a computer vision system, in an industrial environment having a self-organizing storage for a multi-sensor data collector for oil drilling is disclosed.

In embodiments, a system for data collection, using a computer vision system, in an industrial environment having a self-organizing network coding for multi-sensor data network for oil drilling is disclosed.

In embodiments, a system for data collection, using a computer vision system, in an industrial environment having a wearable haptic user interface for an industrial sensor data collector, with vibration, heat, electrical and/or sound outputs for oil drilling is disclosed.

In embodiments, a system for data collection, using a computer vision system, in an industrial environment having heat maps displaying collection data for AR/VR for oil drilling is disclosed.

In embodiments, a system for data collection, using a computer vision system, in an industrial environment having automatically tuned AR/VR visualization of data collected by a data collector for oil drilling is disclosed.

In embodiments, a system for data collection, using a computer vision system, in an industrial environment having an IoT platform for oil drilling is disclosed.

In embodiments, a system for data collection, using a computer vision system, in an industrial environment having an IoT data adapter for receiving data inputs and establishing a connection with one or more available IoT cloud platforms to publish the data for oil drilling is disclosed.

In embodiments, a system for data collection, using a computer vision system, in an industrial environment having a condition detector for detecting conditions related to connect attempts made by the IoT data adapter to one or more IoT cloud platforms for oil drilling is disclosed.

In embodiments, a system for data collection, using a computer vision system, in an industrial environment having an IoT data adapter with an adaptation engine for oil drilling is disclosed.

In embodiments, a system for data collection, using a computer vision system, in an industrial environment having the use of machine learning to prepare a data packet or stream for oil drilling is disclosed.

In embodiments, a system for data collection, using a computer vision system, in an industrial environment having a data marketplace that provides a pool of available cloud networking platforms for oil drilling is disclosed.

In embodiments, a system for data collection, using a computer vision system, in an industrial environment having a messaging utility that provides a cloud platform user interface with a message indicating the availability of a new data source and data source integration and usage instructions for oil drilling is disclosed.

In embodiments, a system for data communication, using a computer vision system, between nodes having the ability to maintain a first and second transmission limit based on received rate of arrival and success of delivery feedback messages, and limiting transmission of messages based on the transmission limits for oil drilling is disclosed.

In embodiments, a system for data communication, using a computer vision system, between nodes having the ability to limit transmission of further messages not yet acknowledged as successfully delivered according to the window size for oil drilling is disclosed.

In embodiments, a system for data communication, using a computer vision system, between nodes having the ability to maintain an estimate of a rate of loss events and use it to adjust the rate of redundancy messages for oil drilling is disclosed.

In embodiments, a system for data communication, using a computer vision system, between nodes having an estimated rate of loss events where the error correction code used to determine redundancy messages chosen is based on the estimated rate of loss events for oil drilling is disclosed.

In embodiments, a system for data communication, using a computer vision system, between nodes having the ability to apply forward error correction based on messages received describing channel characteristics for oil drilling is disclosed.

In embodiments, a system for data communication, using a computer vision system, between nodes having the ability to maintain/set timers based on occurrences of delivery order events and delaying transmission of feedback messages using timers for oil drilling is disclosed.

In embodiments, a system for data communication, using a computer vision system, between nodes having the ability to maintain/set timers based on occurrences of delivery order events and delaying modification of congestion window size based on timers for oil drilling is disclosed.

In embodiments, a system for data communication, using a computer vision system, between nodes having the ability to maintain/set timers based on occurrences of delivery order events, delaying modification of congestion window size based on timers, and cancelling modification of congestion window size when receiving a feedback message indicating successful delivery for oil drilling is disclosed.

In embodiments, a system for data communication, using a computer vision system, between nodes having the ability to configure a new connection using maintained data characterizing a current/previous connection for oil drilling is disclosed.

In embodiments, a system for data communication, using a computer vision system, between nodes having the ability to configure a new connection using maintained data characterizing an error rate of a current/previous connection for oil drilling is disclosed.

In embodiments, a system for data communication, using a computer vision system, between nodes having the ability to configure a new connection using maintained data characterizing a timing variability of a current/previous connection for oil drilling is disclosed.

In embodiments, a system for data communication, using a computer vision system, between nodes having the ability to configure a new connection using maintained data characterizing bandwidth of a current/previous connection for oil drilling is disclosed.

In embodiments, a system for data communication, using a computer vision system, between nodes having the ability to configure a new connection using maintained data characterizing round trip time of a current/previous connection for oil drilling is disclosed.

In embodiments, a system for data communication, using a computer vision system, between nodes having the ability to configure a new connection using maintained data characterizing communication control parameters of a current/previous connection for oil drilling is disclosed.

In embodiments, a system for data communication, using a computer vision system, between nodes having the ability to configure new connection using maintained data characterizing forward error correction parameters of a current/previous connection for oil drilling is disclosed.

In embodiments, a system for data communication, using a computer vision system, between nodes having a data store for maintaining data characterizing one or more current or previous data communication connections and a connection initiation module for initiating new data communication connections based on maintained data for oil drilling is disclosed.

In embodiments, a system for data communication, using a computer vision system, between nodes having the ability to transmit a first subset of data messages over a lower latency data path and a second subset of messages over a higher latency data path for oil drilling is disclosed.

In embodiments, a system for data communication, using a computer vision system, between nodes having the ability to transmit a first subset of data messages that are time critical over a lower latency data path and a second subset of messages over a higher latency data path for oil drilling is disclosed.

In embodiments, a system for data communication, using a computer vision system, between nodes having the ability to transmit a first initial subset of data messages over a lower latency data path and a second subset of messages that are subsequently available over a higher latency data path for oil drilling is disclosed.

In embodiments, a system for data communication, using a computer vision system, between nodes having the ability to transmit a first subset of acknowledgment messages over a lower latency data path and a second subset of data messages over a higher latency data path for oil drilling is disclosed.

In embodiments, a system for data communication, using a computer vision system, between nodes having the ability to transmit a first subset of supplemental/redundancy data messages over a lower latency data path and a second subset of data messages over a higher latency data path for oil drilling is disclosed.

In embodiments, a system for data communication, using a computer vision system, between nodes having a degree of redundancy associated with each message that is based on message position in the transmission order for oil drilling is disclosed.

In embodiments, a system for data communication, using a computer vision system, between nodes having a degree of redundancy associated with each message that increases as the position of the messages is non-decreasing for oil drilling is disclosed.

In embodiments, a system for data communication, using a computer vision system, between nodes having a degree of redundancy associated with each message that is based on message position in the transmission order and in response to receiving feedback messages for oil drilling is disclosed.

In embodiments, a system for data communication, using a computer vision system, between nodes having a degree of redundancy associated with each message that is based on message position in the transmission order and in response to receiving feedback messages, and adding or removing redundancy messages from the queue based on the feedback messages for oil drilling is disclosed.

In embodiments, a system for data communication, using a computer vision system, between nodes having the ability to adjust the number of messages sent over each of multiple different data paths with different communication protocols if it is determined that a data path is altering flow of messages for oil drilling is disclosed.

In embodiments, a system for data communication, using a computer vision system, between nodes having the ability to adjust the number of messages sent over each of multiple different data paths with different communication protocols if it is determined that a data path is altering flow of messages initial division based on previous communication connections for oil drilling is disclosed.

In embodiments, a system for data communication, using a computer vision system, between nodes having the ability to modify/add/remove redundancy information associated with encoded data as it travels from node to node via channels based on channel characteristics for oil drilling is disclosed.

In embodiments, a system for data communication, using a computer vision system, between nodes having the ability to send FEC packets at an estimated rate of loss events (isolated packet loss or burst of consecutive packets) for oil drilling is disclosed.

In embodiments, a system for data communication, using a computer vision system, between nodes having combined coding, TCP, and pacing of packet transmissions for oil drilling is disclosed.

In embodiments, a system for data communication, using a computer vision system, between nodes having a forward error correction code construction that interleaves groups of message packets and parity packets and has coding across overlapping groups of message packets for oil drilling is disclosed.

In embodiments, a system for data communication, using a computer vision system, between nodes having a variant of TCP that combines delay-based back-off with a stable window increase function for oil drilling is disclosed.

In embodiments, a system for data collection, using a computer vision system, in an industrial environment having the use of an analog cross point switch for collecting variable groups of analog sensor inputs for oil pipelines is disclosed.

In embodiments, a system for data collection, using a computer vision system, in an industrial environment having up front signal conditioning on a multiplexer for improved signal-to-noise ratio for oil pipelines is disclosed.

In embodiments, a system for data collection, using a computer vision system, in an industrial environment having multiplexer continuous monitoring alarming features for oil pipelines is disclosed.

In embodiments, a system for data collection, using a computer vision system, in an industrial environment having the use of distributed CPLD chips with dedicated bus for logic control of multiple MUX and data acquisition sections for oil pipelines is disclosed.

In embodiments, a system for data collection, using a computer vision system, in an industrial environment having high-amperage input capability using solid state relays and design topology for oil pipelines is disclosed.

In embodiments, a system for data collection, using a computer vision system, in an industrial environment having power-down ability of at least one of an analog sensor channel and a component board for oil pipelines is disclosed.

In embodiments, a system for data collection, using a computer vision system, in an industrial environment having unique electrostatic protection for trigger and vibration inputs for oil pipelines is disclosed.

In embodiments, a system for data collection, using a computer vision system, in an industrial environment having precise voltage reference for A/D zero reference for oil pipelines is disclosed.

In embodiments, a system for data collection, using a computer vision system, in an industrial environment having a phase-lock loop band-pass tracking filter for obtaining slow-speed RPMs and phase information for oil pipelines is disclosed.

In embodiments, a system for data collection, using a computer vision system, in an industrial environment having digital derivation of phase relative to input and trigger channels using on-board timers for oil pipelines is disclosed.

In embodiments, a system for data collection, using a computer vision system, in an industrial environment having a peak-detector for auto-scaling that is routed into a separate analog-to-digital converter for peak detection for oil pipelines is disclosed.

In embodiments, a system for data collection, using a computer vision system, in an industrial environment having routing of a trigger channel that is either raw or buffered into other analog channels for oil pipelines is disclosed.

In embodiments, a system for data collection, using a computer vision system, in an industrial environment having the use of higher input oversampling for delta-sigma A/D for lower sampling rate outputs to minimize AA filter requirements for oil pipelines is disclosed.

In embodiments, a system for data collection, using a computer vision system, in an industrial environment having the use of a CPLD as a clock-divider for a delta-sigma analog-to-digital converter to achieve lower sampling rates without the need for digital resampling for oil pipelines is disclosed.

In embodiments, a system for data collection, using a computer vision system, in an industrial environment having long blocks of data at a high-sampling rate as opposed to multiple sets of data taken at different sampling rates for oil pipelines is disclosed.

In embodiments, a system for data collection, using a computer vision system, in an industrial environment having storage of calibration data with maintenance history on-board card set for oil pipelines is disclosed.

In embodiments, a system for data collection, using a computer vision system, in an industrial environment having a rapid route creation capability using hierarchical templates for oil pipelines is disclosed.

In embodiments, a system for data collection, using a computer vision system, in an industrial environment having intelligent management of data collection bands for oil pipelines is disclosed.

In embodiments, a system for data collection, using a computer vision system, in an industrial environment having a neural net expert system using intelligent management of data collection bands for oil pipelines is disclosed.

In embodiments, a system for data collection, using a computer vision system, in an industrial environment having use of a database hierarchy in sensor data analysis for oil pipelines is disclosed.

In embodiments, a system for data collection, using a computer vision system, in an industrial environment having an expert system GUI graphical approach to defining intelligent data collection bands and diagnoses for the expert system for oil pipelines is disclosed.

In embodiments, a system for data collection, using a computer vision system, in an industrial environment having a graphical approach for back-calculation definition for oil pipelines is disclosed.

In embodiments, a system for data collection, using a computer vision system, in an industrial environment having proposed bearing analysis methods for oil pipelines is disclosed.

In embodiments, a system for data collection, using a computer vision system, in an industrial environment having torsional vibration detection/analysis utilizing transitory signal analysis for oil pipelines is disclosed.

In embodiments, a system for data collection, using a computer vision system, in an industrial environment having improved integration using both analog and digital methods for oil pipelines is disclosed.

In embodiments, a system for data collection, using a computer vision system, in an industrial environment having adaptive scheduling techniques for continuous monitoring of analog data in a local environment for oil pipelines is disclosed.

In embodiments, a system for data collection, using a computer vision system, in an industrial environment having data acquisition parking features for oil pipelines is disclosed.

In embodiments, a system for data collection, using a computer vision system, in an industrial environment having a self-sufficient data acquisition box for oil pipelines is disclosed.

In embodiments, a system for data collection, using a computer vision system, in an industrial environment having SD card storage for oil pipelines is disclosed.

In embodiments, a system for data collection, using a computer vision system, in an industrial environment having extended onboard statistical capabilities for continuous monitoring for oil pipelines is disclosed.

In embodiments, a system for data collection, using a computer vision system, in an industrial environment having the use of ambient, local and vibration noise for prediction for oil pipelines is disclosed.

In embodiments, a system for data collection, using a computer vision system, in an industrial environment having smart route changes route based on incoming data or alarms enable simultaneous dynamic data for analysis or correlation for oil pipelines is disclosed.

In embodiments, a system for data collection, using a computer vision system, in an industrial environment having smart ODS and transfer functions for oil pipelines is disclosed.

In embodiments, a system for data collection, using a computer vision system, in an industrial environment having hierarchical multiplexer for oil pipelines is disclosed.

In embodiments, a system for data collection, using a computer vision system, in an industrial environment having identification sensor overload for oil pipelines is disclosed.

In embodiments, a system for data collection, using a computer vision system, in an industrial environment having RF identification and an inclinometer for oil pipelines is disclosed.

In embodiments, a system for data collection, using a computer vision system, in an industrial environment having continuous ultrasonic monitoring for oil pipelines is disclosed.

In embodiments, a system for data collection, using a computer vision system, in an industrial environment having cloud-based, machine pattern recognition based on fusion of remote, analog industrial sensors for oil pipelines is disclosed.

In embodiments, a system for data collection, using a computer vision system, in an industrial environment having cloud-based, machine pattern analysis of state information from multiple analog industrial sensors to provide anticipated state information for an industrial system for oil pipelines is disclosed.

In embodiments, a system for data collection, using a computer vision system, in an industrial environment having cloud-based policy automation engine for IoT, with creation, deployment and management of IoT devices for oil pipelines is disclosed.

In embodiments, a system for data collection, using a computer vision system, in an industrial environment having on-device sensor fusion and data storage for industrial IoT devices for oil pipelines is disclosed.

In embodiments, a system for data collection, using a computer vision system, in an industrial environment having a self-organizing data marketplace for industrial IoT data for oil pipelines is disclosed.

In embodiments, a system for data collection, using a computer vision system, in an industrial environment having self-organization of data pools based on utilization and/or yield metrics for oil pipelines is disclosed.

In embodiments, a system for data collection, using a computer vision system, in an industrial environment having training AI models based on industry-specific feedback for oil pipelines is disclosed.

In embodiments, a system for data collection, using a computer vision system, in an industrial environment having a self-organized swarm of industrial data collectors for oil pipelines is disclosed.

In embodiments, a system for data collection, using a computer vision system, in an industrial environment having an IoT distributed ledger for oil pipelines is disclosed.

In embodiments, a system for data collection, using a computer vision system, in an industrial environment having a self-organizing collector for oil pipelines is disclosed.

In embodiments, a system for data collection, using a computer vision system, in an industrial environment having a network-sensitive collector for oil pipelines is disclosed.

In embodiments, a system for data collection, using a computer vision system, in an industrial environment having a remotely organized collector for oil pipelines is disclosed.

In embodiments, a system for data collection, using a computer vision system, in an industrial environment having a self-organizing storage for a multi-sensor data collector for oil pipelines is disclosed.

In embodiments, a system for data collection, using a computer vision system, in an industrial environment having a self-organizing network coding for multi-sensor data network for oil pipelines is disclosed.

In embodiments, a system for data collection, using a computer vision system, in an industrial environment having a wearable haptic user interface for an industrial sensor data collector, with vibration, heat, electrical and/or sound outputs for oil pipelines is disclosed.

In embodiments, a system for data collection, using a computer vision system, in an industrial environment having heat maps displaying collection data for AR/VR for oil pipelines is disclosed.

In embodiments, a system for data collection, using a computer vision system, in an industrial environment having automatically tuned AR/VR visualization of data collected by a data collector for oil pipelines is disclosed.

In embodiments, a system for data collection, using a computer vision system, in an industrial environment having an IoT platform for oil pipelines is disclosed.

In embodiments, a system for data collection, using a computer vision system, in an industrial environment having an IoT data adapter for receiving data inputs and establishing a connection with one or more available IoT cloud platforms to publish the data for oil pipelines is disclosed.

In embodiments, a system for data collection, using a computer vision system, in an industrial environment having a condition detector for detecting conditions related to connect attempts made by the IoT data adapter to one or more IoT cloud platforms for oil pipelines is disclosed.

In embodiments, a system for data collection, using a computer vision system, in an industrial environment having an IoT data adapter with an adaptation engine for oil pipelines is disclosed.

In embodiments, a system for data collection, using a computer vision system, in an industrial environment having the use of machine learning to prepare a data packet or stream for oil pipelines is disclosed.

In embodiments, a system for data collection, using a computer vision system, in an industrial environment having a data marketplace that provides a pool of available cloud networking platforms for oil pipelines is disclosed.

In embodiments, a system for data collection, using a computer vision system, in an industrial environment having a messaging utility that provides a cloud platform user interface with a message indicating the availability of a new data source and data source integration and usage instructions for oil pipelines is disclosed.

In embodiments, a system for data communication, using a computer vision system, between nodes having the ability to maintain a first and second transmission limit based on received rate of arrival and success of delivery feedback messages, and limiting transmission of messages based on the transmission limits for oil pipelines is disclosed.

In embodiments, a system for data communication, using a computer vision system, between nodes having the ability to limit transmission of further messages not yet acknowledged as successfully delivered according to the window size for oil pipelines is disclosed.

In embodiments, a system for data communication, using a computer vision system, between nodes having the ability to maintain an estimate of a rate of loss events and use it to adjust the rate of redundancy messages for oil pipelines is disclosed.

In embodiments, a system for data communication, using a computer vision system, between nodes having an estimated rate of loss events where the error correction code used to determine redundancy messages chosen is based on the estimated rate of loss events for oil pipelines is disclosed.

In embodiments, a system for data communication, using a computer vision system, between nodes having the ability to apply forward error correction based on messages received describing channel characteristics for oil pipelines is disclosed.

In embodiments, a system for data communication, using a computer vision system, between nodes having the ability to maintain/set timers based on occurrences of delivery order events and delaying transmission of feedback messages using timers for oil pipelines is disclosed.

In embodiments, a system for data communication, using a computer vision system, between nodes having the ability to maintain/set timers based on occurrences of delivery order events and delaying modification of congestion window size based on timers for oil pipelines is disclosed.

In embodiments, a system for data communication, using a computer vision system, between nodes having the ability to maintain/set timers based on occurrences of delivery order events, delaying modification of congestion window size based on timers, and cancelling modification of congestion window size when receiving a feedback message indicating successful delivery for oil pipelines is disclosed.

In embodiments, a system for data communication, using a computer vision system, between nodes having the ability to configure a new connection using maintained data characterizing a current/previous connection for oil pipelines is disclosed.

In embodiments, a system for data communication, using a computer vision system, between nodes having the ability to configure a new connection using maintained data characterizing an error rate of a current/previous connection for oil pipelines is disclosed.

In embodiments, a system for data communication, using a computer vision system, between nodes having the ability to configure a new connection using maintained data characterizing a timing variability of a current/previous connection for oil pipelines is disclosed.

In embodiments, a system for data communication, using a computer vision system, between nodes having the ability to configure a new connection using maintained data characterizing bandwidth of a current/previous connection for oil pipelines is disclosed.

In embodiments, a system for data communication, using a computer vision system, between nodes having the ability to configure a new connection using maintained data characterizing round trip time of a current/previous connection for oil pipelines is disclosed.

In embodiments, a system for data communication, using a computer vision system, between nodes having the ability to configure a new connection using maintained data characterizing communication control parameters of a current/previous connection for oil pipelines is disclosed.

In embodiments, a system for data communication, using a computer vision system, between nodes having the ability to configure new connection using maintained data characterizing forward error correction parameters of a current/previous connection for oil pipelines is disclosed.

In embodiments, a system for data communication, using a computer vision system, between nodes having a data store for maintaining data characterizing one or more current or previous data communication connections and a connection initiation module for initiating new data communication connections based on maintained data for oil pipelines is disclosed.

In embodiments, a system for data communication, using a computer vision system, between nodes having the ability to transmit a first subset of data messages over a lower latency data path and a second subset of messages over a higher latency data path for oil pipelines is disclosed.

In embodiments, a system for data communication, using a computer vision system, between nodes having the ability to transmit a first subset of data messages that are time critical over a lower latency data path and a second subset of messages over a higher latency data path for oil pipelines is disclosed.

In embodiments, a system for data communication, using a computer vision system, between nodes having the ability to transmit a first initial subset of data messages over a lower latency data path and a second subset of messages that are subsequently available over a higher latency data path for oil pipelines is disclosed.

In embodiments, a system for data communication, using a computer vision system, between nodes having the ability to transmit a first subset of acknowledgment messages over a lower latency data path and a second subset of data messages over a higher latency data path for oil pipelines is disclosed.

In embodiments, a system for data communication, using a computer vision system, between nodes having the ability to transmit a first subset of supplemental/redundancy data messages over a lower latency data path and a second subset of data messages over a higher latency data path for oil pipelines is disclosed.

In embodiments, a system for data communication, using a computer vision system, between nodes having a degree of redundancy associated with each message that is based on message position in the transmission order for oil pipelines is disclosed.

In embodiments, a system for data communication, using a computer vision system, between nodes having a degree of redundancy associated with each message that increases as the position of the messages is non-decreasing for oil pipelines is disclosed.

In embodiments, a system for data communication, using a computer vision system, between nodes having a degree of redundancy associated with each message that is based on message position in the transmission order and in response to receiving feedback messages for oil pipelines is disclosed.

In embodiments, a system for data communication, using a computer vision system, between nodes having a degree of redundancy associated with each message that is based on message position in the transmission order and in response to receiving feedback messages, and adding or removing redundancy messages from the queue based on the feedback messages for oil pipelines is disclosed.

In embodiments, a system for data communication, using a computer vision system, between nodes having the ability to adjust the number of messages sent over each of multiple different data paths with different communication protocols if it is determined that a data path is altering flow of messages for oil pipelines is disclosed.

In embodiments, a system for data communication, using a computer vision system, between nodes having the ability to adjust the number of messages sent over each of multiple different data paths with different communication protocols if it is determined that a data path is altering flow of messages initial division based on previous communication connections for oil pipelines is disclosed.

In embodiments, a system for data communication, using a computer vision system, between nodes having the ability to modify/add/remove redundancy information associated with encoded data as it travels from node to node via channels based on channel characteristics for oil pipelines is disclosed.

In embodiments, a system for data communication, using a computer vision system, between nodes having the ability to send FEC packets at an estimated rate of loss events (isolated packet loss or burst of consecutive packets) for oil pipelines is disclosed.

In embodiments, a system for data communication, using a computer vision system, between nodes having combined coding, TCP, and pacing of packet transmissions for oil pipelines is disclosed.

In embodiments, a system for data communication, using a computer vision system, between nodes having a forward error correction code construction that interleaves groups of message packets and parity packets and has coding across overlapping groups of message packets for oil pipelines is disclosed.

In embodiments, a system for data communication, using a computer vision system, between nodes having a variant of TCP that combines delay-based back-off with a stable window increase function for oil pipelines is disclosed.

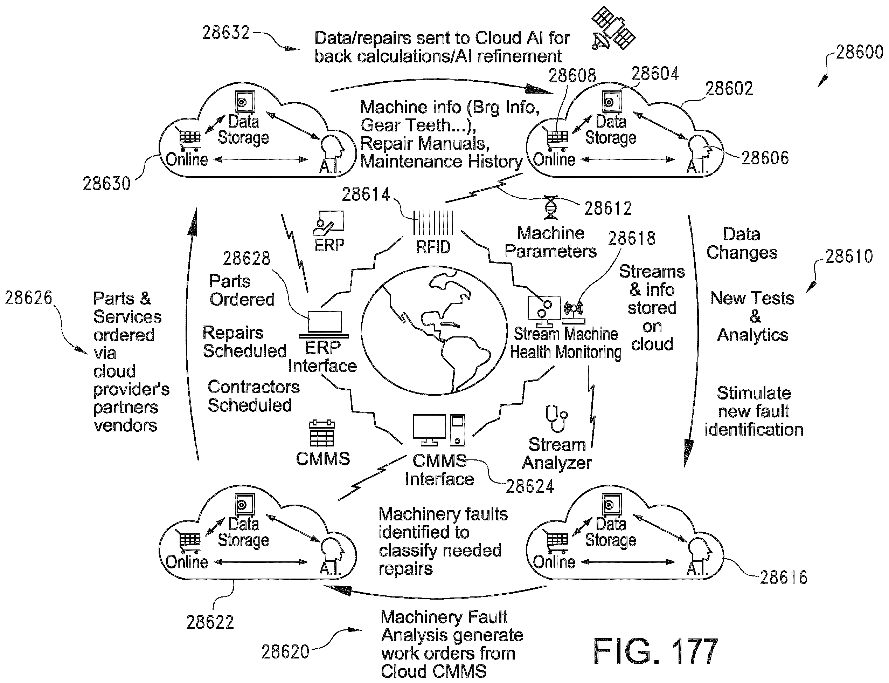

In embodiments, flow of information among participants and elements of a predictive maintenance knowledge platform may be configured as depicted in Figure 177. A platform 28600 as exemplary configured in Figure 177 may include a plurality of subsystems that may include one or more of: data storage, machine intelligence, and industrial machine-related transactions. Such a subsystem may be a web-server based system, a distributed system, a handheld device, an industrial machine co-resident system, and the like. In an example, the industrial machine maintenance data analysis subsystem 28602 may include a data storage 28604, machine learning and/or an artificial intelligence facilities 28606, a transaction facility 28608 and the like. The Industrial machine maintenance data analysis subsystem 28602 may provide services 28610 including updates to industrial machine related data, such as service criteria, fault prevention, service pricing, parts pricing, tests and criteria for detecting potential machine faults, analysis of repairs and the like, functions and updates to fault prediction metadata, and the like. The industrial machine maintenance data analysis subsystem 28602 may provide information, such as those associated with the provided services 28610, in the form of streams, transactions, database reading and writing, and the like for access to cloud-based data storage. The industrial machine maintenance data analysis subsystem 28602 may receive information regarding individual industrial machines from the machines via the data collection network 28612. In embodiments, a data collection network 28612 may be described herein and in the documents referenced and incorporated herein. The industrial machine maintenance data analysis subsystem 28602 may receive information from specific industrial machines such as machine parameters and the like that may be retrieved from one or more smart RFID elements 28614 of the industrial machine. In embodiments, smart RFID elements may be configured with portions of industrial machine and may have functionality as described elsewhere herein.

In embodiments, an industrial machine predictive maintenance subsystem 28616 may apply machinery fault detection, identification, classification, and related algorithms to the data provided from the industrial machine maintenance data analysis subsystem 28602 and to data further provided from an industrial machine health monitoring facilities 28618 and the like to generate data structures, streams, and other electronic data that may be communicated to facilitate predictive maintenance of industrial machines. In embodiments, the industrial machine predictive maintenance subsystem 28616 may receive and analyze a stream or the like of industrial health monitoring data from the industrial machine health monitoring facility 28618. One or more results of such stream analysis may include determination of conditions that indicate a healthy machine, an unhealthy machine, a likelihood of at least a portion of a machine that may need service to avoid a fault, a specific machine that requires service, and the like. Conditions that may indicate a healthy machine may be a result of tests and the like performed on or by industrial machines and communicated to the machine health monitoring facility 28618. In an example, the machine health monitoring facility 28618 may receive operation-related information, such as sensor data from industrial machine motors (e.g., torque, revolutions per minute, run time, start/stop data, directional data and the like) in a live or delayed stream from one or more industrial machines. This operation-related data may be processed by the health monitoring facility 28618 to detect when, for example, a number of revolutions over a set period of time, such as a day, week, month and the like exceeds a maintenance threshold value. A portion of the stream data and/or the result of processing by the health monitoring facility 28618 may be provided, such as a stream and the like to the industrial machine predictive maintenance subsystem 28616 for uses as described, including identifying potential faults and the like that are to be addressed with predictive maintenance and the like. The industrial machine predictive maintenance subsystem 28616 may generate one or more predictive maintenance sets of data 28620 that may identify one or more industrial machines and may indicate portion(s) of the machine that are determined to benefit from service, maintenance, repair, replacement and the like. The sets of data 28620 may include specific parts, service procedures, materials, service timeframes, required to perform a predictive maintenance activity on one or more specific industrial machines. In embodiments, machine fault analysis that may be performed by the industrial machine predictive maintenance subsystem 28616 may facilitate generating work orders from a CMMS subsystem 28622.

In embodiments, the CMMS subsystem 28622 may receive industrial machine details, service (e.g., repair, maintenance, upgrade, and the like) details for the industrial machine, procedures to be followed, parts needed, and the like from sources such as the industrial machine predictive maintenance subsystem 28616, a CMMS interface 28624, data structures configured and maintained that may include parts lists and the like for the industrial machine and any other information to facilitate performing service on the industrial machine. The CMMS subsystem 28622 may initiate actions with parts suppliers, service providers, third-party partners, vendors, an owner/operator of the industrial machine to be serviced and the like. In an example, the CMMS subsystem 28622 may generate orders for services from one or more service providers that are known to the CMMS subsystem 28622 as qualified to provide the services required.

In embodiments, the CMMS subsystem 28622 may interface with one or more predictive maintenance knowledge bases and/or knowledge graphs that may be stored in a data store accessible by the CMMS subsystem. In embodiments, such a CMMS knowledge base or the like may further include a knowledge graph that may contain information beneficial to the service determination and order generation services provided by the CMMS subsystem 28622. A CMMS knowledge graph may contain or provide computer access to information about industrial machines, service activity of industrial machines, costs (e.g., historical, trending, and predictive) for parts, materials, tools, and services of industrial machines, algorithms and functionality for delivering the CMMS services 28626 and the like. The CMMS subsystem 28622 may facilitate coordination with service providers, parts providers, material and tool providers and the like based on an industrial machine owner's decision regarding servicing the industrial machine so that the service can be performed in a timeframe that the owner chooses.

The CMMS subsystem 28622 may access information in the smart RFID element(s) 28614 via the CMMS interface 28624 that may facilitate access to individual industrial machines and the like. The CMMS subsystem 28622 may use information received via the CMMS interface 28624 to facilitate performing coordination of resources to perform maintenance effectively and efficiently for the specific machine. In an example, a specific industrial machine may have an operating cycle that results in greater utilization of one of its moving parts (e.g., an industrial motor) than typical. This information may be processed by the predictive maintenance subsystem 28616 and result in an indication of a service that may need to be performed on the machine. The predictive maintenance subsystem 28616 may provide information to the CMMS subsystem 28622 that it would process to generate orders for parts, services, and the like. This knowledge may be used by the CMMS subsystem 28622 to interact with service, parts, and material suppliers to provide a firm quote for performing a utilization-based maintenance service at a different time (e.g., weeks or months sooner) than other comparable industrial machines with lower utilization rates.

In embodiments, the CMMS subsystem 28622 may execute algorithms that gather information about a plurality of industrial machines, including a plurality of industrial machines of different types of machine (e.g., stationary machines, mobile machines, machines on vehicles, machines deployed at job sites, and the like) along with service provider information, parts and parts provider information, part location and inventory information, machine production providers, third-party parts handlers, logistics providers, transportation providers, service standards, service requirements, service activities including results of service and the like, and other information to facilitate providing services 28626 including coordinating orders for services, parts and the like.

In embodiments, in response to industrial machine fault identification information provided from the preventive maintenance subsystem 28616, the predictive maintenance knowledge system 30002 may identify candidate service providers. Service providers that are known to the CMMS subsystem 28622 as having successfully demonstrated experience with the procedure needed for the requested service may be contacted to provide a service estimate and/or a price estimate for service, parts, and the like. Similarly, parts and/or material that may be associated with the procedure of the requested service may be identified. Factors such as part cost, transportation costs, availability, location of the parts versus the machines, prior relationships between one or more parts providers and a party associated with the service request, such as the industrial machine owner and the like, and other factors may be evaluated to determine which parts provider to contact in preparation for ordering the parts. With these factors considered, a part inquiry may be placed with one or more parts providers in anticipation of the service being conducted by the qualified service indication from the preventive maintenance subsystem 28616 with one or more service recommendations. In embodiments, the CMMS subsystem 28622 may have enough information to automatically select a specific service recommendation and may, with or without explicit approval, generate a service order 28626 that may include a parts/material/tools order if needed for the requested service.

In embodiments, information that the CMMS subsystem 28622 may rely on may be sourced from an Enterprise Resource Planning (ERP) interface associated with the industrial machine as well as third-party sources of information such as independent parts suppliers, service providers, and the like that may offer parts and/or services for industrial machines. In embodiments, the CMMS subsystem 28622 may coordinate with an industrial machine owner's ERP system, such as via the ERP interface 28628 to effect placement of orders with the service provider, parts provider, and the like. The CMMS subsystem 28622 may use service material provider information to determine price and availability of service material. This information may be combined with service material inventory information to facilitate generating suitable orders for service material as part of the industrial machine service offering 28626.

In embodiments, the CMMS subsystem 28622 may receive a timeframe in which the repair must be completed in order to avoid failure and the recommended repair with instructions from the manufacturers manual on how to conduct the repair. This repair information may be then processed by the CMMS subsystem 28622 (e.g., a cloud based system) where a work order is created and tracked. The work order may be digitally pushed to the ERP system to check the plant's production schedule to find when the specific machine requiring maintenance is available for repair based on the time frame provided by the analysis and the amount of time the machine will be off-line based on, for example information in a manufacturer's manual referenced in a service procedure that states how much time it should take to make the repair. Once the ERP system finds the available date it may coordinate with the CMMS subsystem 28622 to ask for bids from vendors for the parts and the service work or to place orders for the parts and with a service contractor, such as a preferred contractor. In embodiments, the CMMS subsystem 28622 or the ERP system may configure a request for bids by simply using the manufacturers manual for the procedure to provide the bidders with the required parts information (e.g., part numbers, vintage, revision, specifications, after-market alternatives, last price paid, if a used part is OK, and the like) and the repair actions necessary for the service action (e.g., the procedure steps, diagnostics, equipment/tools required, materials required, personnel required, and the like). A bid may be based on the repair actions listed in the procedure and may become the scope of work for the job to be bid. In embodiments, if there are other problems found and addressed outside of this scope a secondary process may be followed to approve additional compensation to the vendor.

In embodiments, a service delivery and tracking subsystem 28630 may be used by service providers, such as service technicians, industrial machine owners/operators, third parties (e.g., auditors, regulators, union personnel, safety associations, parts manufacturers and the like) to gather and report information associated with an ordered service request as may be determined from service order data 28626. The service delivery and tracking subsystem 28630 may include functionality that matches up machine procedures with service requirements, ensures that images associated with the ordered service (e.g., a part being services, an installation of the machine, a video of the machine operating before and/or after service, parts that have been removed from the industrial machine, service personnel, and the like) are captured with sufficient quality to meet image quality standards for automatic detection of one or more parts of the industrial machine.

In embodiments, the service delivery and tracking subsystem 28630 may report data, repairs, images and the like, collectively service data 28632 to an industrial machine maintenance data analysis subsystem 28602 for refinement of service procedures, parts ordering, and the like.

In embodiments, compensation for work and analysis performed by the various subsystems may be derived from various sources. The CMMS subsystem 28622 operator / owner / affiliate may be compensated on a transaction basis, such as by receiving a fee for each part or service ordered. Such a fee may include a fixed portion (e.g., amount per part order) and may include a variable portion (e.g., a percent of an order total). This fee may be explicitly included in charges billed to a party responsible for payment of the parts and services to perform the maintenance action. This fee may be built into the cost of each part/service and recovered as a deduction from the payment that is passed from the responsible party to the parts and/or service provider.

In embodiments, an industrial machine predictive maintenance system may include an industrial machine data analysis facility that generates streams of industrial machine health monitoring data by applying machine learning to data representative of conditions of portions of industrial machines received via a data collection network. The system may further include an industrial machine predictive maintenance facility that produces industrial machine service recommendations responsive to the health monitoring data by applying machine fault detection and classification algorithms thereto. The system may further include a computerized maintenance management system (CMMS) that produces at least one of orders and requests for service and parts responsive to receiving the industrial machine service recommendations. And, the system may include a service and delivery coordination facility that receives and processes information regarding services performed on industrial machines responsive to the at least one of orders and requests for service and parts, thereby validating the services performed while producing a ledger of service activity and results for individual industrial machines.

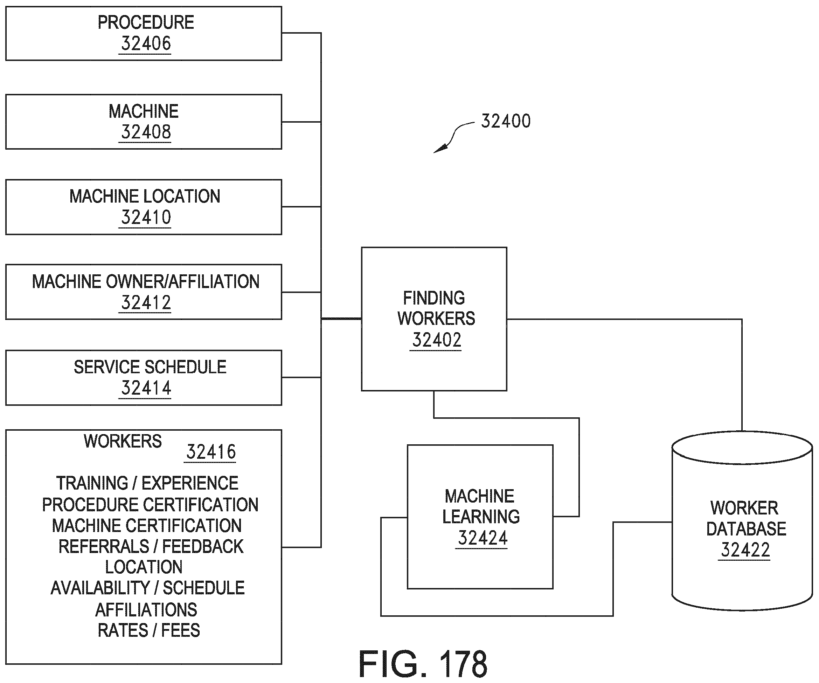

In embodiments, methods and systems for finding a set of workers having relevant know-how and expertise about maintenance, service and repair of a specific machine may employ machine learning algorithms with worker selection algorithms to ensure timely, quality workers are selected and deployed for industrial machine servicing, such as for predictive maintenance and the like described herein. Referring to Figure 178, machine learning-based methods 32400 for finding a set of workers as described above is depicted. In embodiments, the facility for finding workers 32402 may be configured as a system that may include a set of algorithms and data structures that may execute on a processor. The worker finding facility 32402 may process data about workers, machines, procedures, and the like with algorithms that facilitate matching qualified workers with service activities, such as predictive maintenance activities and the like. In an example of finding workers, a service activity may include following a service or maintenance procedure 32406, such as to repair and/or maintain a portion of an industrial machine. The procedure 32406 may further indicate one or more industrial machines, such as by model number, family, and the like. The worker finding facility 32402 may further access, such as by retrieving information about workers from a worker database 32422, information that facilitates characterizing one or more workers, including procedures for which the worker has experience, training, certification and the like. One or more workers who have experience and the like with the procedure may be selected for further refinement, which may include matching a worker location to a machine location, a worker availability and/or schedule to a machine service schedule, worker rates/fees to machine owner service budgets and the like. One or more workers on a resulting list of refined workers may be contacted about a service to be performed on the machine. Based on, for example, replies to such worker contact, a primary worker may be selected by the worker finding facility 32402 and allocated to perform the service via the procedure 32406.

In embodiments, the worker finding facility 32402 may access a list of procedures 3246 for which service may be required. The worker finding facility 32402 may build a data set of workers that qualify for performing the procedure, such as by searching through worker information 32416 for workers who meet procedure criteria, such as a number of times the worker has performed the procedure, a number of times a worker has performed a similar procedure, and the like. Workers with more experience may be marked as preferred workers in such a database for the specific procedure so that when the procedure is required to be performed, those preferred workers may be readily identified. In embodiments, workers may directly maintain the worker database 32422 by updating information regarding procedures and the like that they perform.

In embodiments, the worker finding facility 32402 may receive information about procedures 32406, machines 32408, machine location 32410, machine owner and/or affiliation 32412, required service schedule 32414 and the like for one or more service activities, such as a predictive maintenance activity and the like to be performed and form a profile of a preferred worker for a given combination of procedure, machine, location, owner, schedule and the like. The worker finding facility 32402 may build a profile for various combinations of such information so that workers that best meet the profile may be readily found. In embodiments, such preferred worker profiles may be published so that third parties, such as service organizations and the like may provide estimates and the like for providing a service based on the profile. These estimates may be captured and used by the methods and systems of predictive maintenance of industrial machines and the like to build a marketplace of service providers for common or often required services, such as preventive maintenance services and the like.

In embodiments, information captured in the worker database 32422 and the like may be processed with machine learning algorithms 32424 to facilitate improving matching of workers with requirements for providing qualified workers for procedures and the like. In embodiments, the preferred worker profiles and information received in response to their publication may be processed with the machine learning algorithms 32424 to refine the algorithms that are used to build preferred worker profiles.

In embodiments, additional information that may influence worker selection by the worker finding facility 32402 may include affiliation of the worker with service organizations, manufacturers of industrial machines, industry organizations, and the like. Referrals and or feedback on specific workers may be factored into determination of individual workers, worker groups and the like as to their preferred worker status and the like. Worker rates and/or fees (e.g., based on estimates, actual charges, payment terms and the like) may further be factored into finding a worker, such that workers that when two or more workers overall have comparable qualifications, a worker with lower costs or easier payment terms may be ranked higher for a given procedure than one with higher cost and the like.

In embodiments, techniques for finding workers may be performed in real-time or near real time as demands for industrial machines require. In this way, as new workers become available, finding a worker may incorporate updates to worker profiles and the like that may be accessible over websites, and the like via the Internet.

In embodiments, a system may include an industrial machine predictive maintenance facility that produces industrial machine service recommendations by applying machine fault detection and classification algorithms to industrial machine health monitoring data. Such a system may also include a worker finding facility that identifies at least one candidate worker for performing a service indicated by the industrial machine service recommendations by correlating information in the recommendation regarding at least one service to be performed with at least one of experience and know-how for industrial service workers in an industrial service worker database. In embodiments, the system may include machine learning algorithms executing on a processor that improve the correlating based on service-related information for a plurality of services performed on similar industrial machines and worker-related information for a plurality of services performed by the at least one candidate worker.

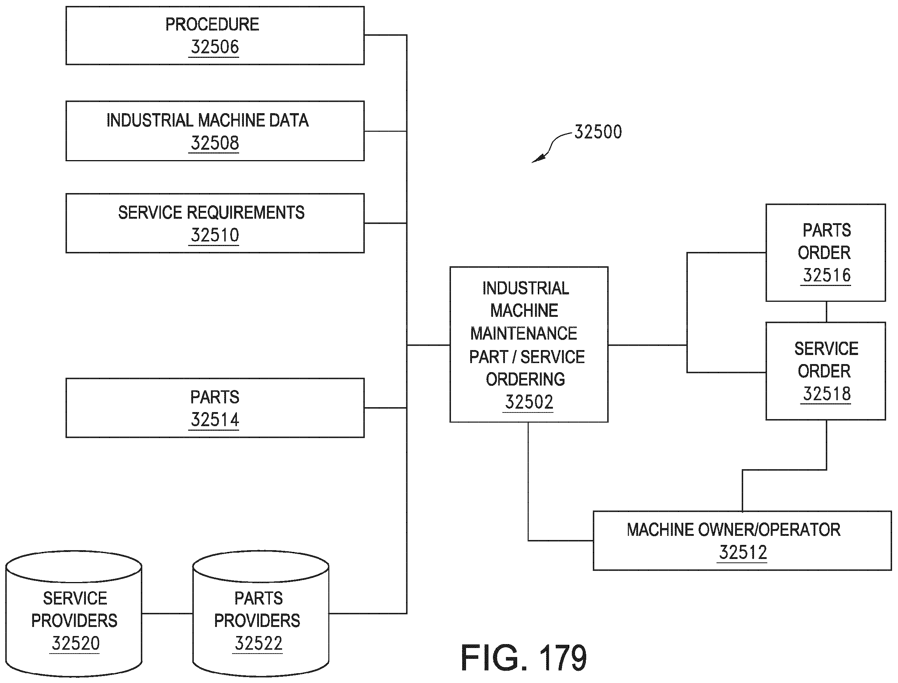

In embodiments, an industrial machine maintenance part/service ordering facility 32502 for industrial machine service and maintenance 32500, including predictive maintenance and the like may be embodied as depicted at least in Figure 179 filed herewith. The industrial machine maintenance part/service ordering facility 32502 may facilitate finding, ordering, and fulfilling orders for relevant parts and components, so that maintenance, service and repair operations for industrial machines can occur seamlessly, with minimal disruption. In embodiments, the industrial machine maintenance part/service ordering facility 32502 may receive industrial machine details 32508, service (e.g., repair, maintenance, upgrade, and the like) details 32510 for an industrial machine, procedures to be followed 32506, parts needed 32514, service providers 32520, parts providers 32522 and the like. The industrial machine maintenance part/service ordering facility 32502 may initiate actions with parts suppliers, service providers, third-party partners, vendors, an owner/operator of the industrial machine to be serviced and the like. In an example, the industrial machine maintenance part/service ordering facility 32502 may generate orders for services 32518 from one or more service providers 32520 that are known to the industrial machine maintenance part/service ordering facility 32502 as qualified to provide the services required. The industrial machine maintenance part/service ordering facility 32502 may also generate orders for parts 32516 from one or more parts providers 32522 that are known as qualified to provide the parts required, on time, within budget, and the like. The parts orders 32516 and the service orders 32518 may also be communicated to an owner 32512 or other entity responsible for ensuring access to the industrial machine. The parts and service providers selected may further coordinate with the owner 32512 to ensure the service can be properly delivered. The industrial machine maintenance part/service ordering facility 32502 may have access to the machine owner 32512 preferences and/or requirements regarding scheduling, budgets, service and parts provider preferences and/or affiliations, and the like to facilitate coordination with service providers, parts providers, material and tool providers and the like based thereon.

Factors such as part cost, transportation costs, availability, location of the parts versus the machines, prior relationships between one or more parts providers and a party associated with the service request, such as the industrial machine owner and the like, and other factors may be evaluated to determine which parts provider 32522 to contact in preparation for ordering the parts 32516. With these factors considered, a part inquiry may be placed with one or more parts providers 32522 in anticipation of the service being conducted by the qualified service provider. In embodiments, the industrial machine maintenance parts/service ordering facility 32502 may have enough information to automatically select a specific service provider 32520 and may, with or without explicit approval, generate the service order 32518.

In embodiments, information that the industrial machine maintenance part/service ordering facility 32502 may rely information regarding vendors, and the like from an Enterprise Resource Planning (ERP) system owned and or operated by the owner of the industrial machine. In embodiments, the industrial machine maintenance part/service ordering facility 32502 may coordinate with an industrial machine owner's ERP system to effect placement of orders with the service provider, parts provider, and the like.

In embodiments, a system may include an industrial machine maintenance part and service ordering facility that prepares and controls orders for parts and services responsive to service recommendations received from an industrial machine predictive maintenance facility that produces industrial machine service recommendations by applying machine fault detection and classification algorithms to industrial machine health monitoring data. In embodiments, the system may further analyze a procedure associated with the service recommendations for generating at least one of the orders for parts and services.

In embodiments, an industrial machine predictive maintenance system may include deployment of smart RFID devices on portions of industrial machines. The smart RFID devices may be configured to include information about the machine, such as configuration information, assembly information, physical element details (e.g., part numbers, revisions, production details, test details, and the like), procedure information (e.g., assembly, disassembly, test, configuration, service, parts replacement, and the like), and other operational information and the like. Smart RFID devices may be disposed with each major element in a machine, such as each element that might include information relevant for efficient service and maintenance of the machine. In embodiments, disposing smart RFID devices may be configured into the production of industrial machine and the like parts and sub systems so that production information and the like of the part(s) can be captured for the specific part, and the like. A smart RFID element may not only provide storage for a range of information, including large service manuals and the like, a smart RFID element may include functionality, such as searching, indexing, linking, and the like that may facilitate users quickly finding procedures, such as lubricating procedures, bearing replacement procedures, bearing fault frequencies, and the like that may be crucial for machine trouble shooting and the like. In embodiments, at least one method for accessing the information may be compatible with existing techniques used by expert service personnel, which may be taught to new service providers while these experts remain on the job. In embodiments, providing easy access, including indexing, linking and the like may be built into the documents, procedures, data sheets, manuals and the like during their creation so that common access approaches can be used for any embodiment of the information (e.g., in the smart RFID, in a cloud representation of the RFID, in 3rd party service manuals, in industrial machine producer systems and the like).

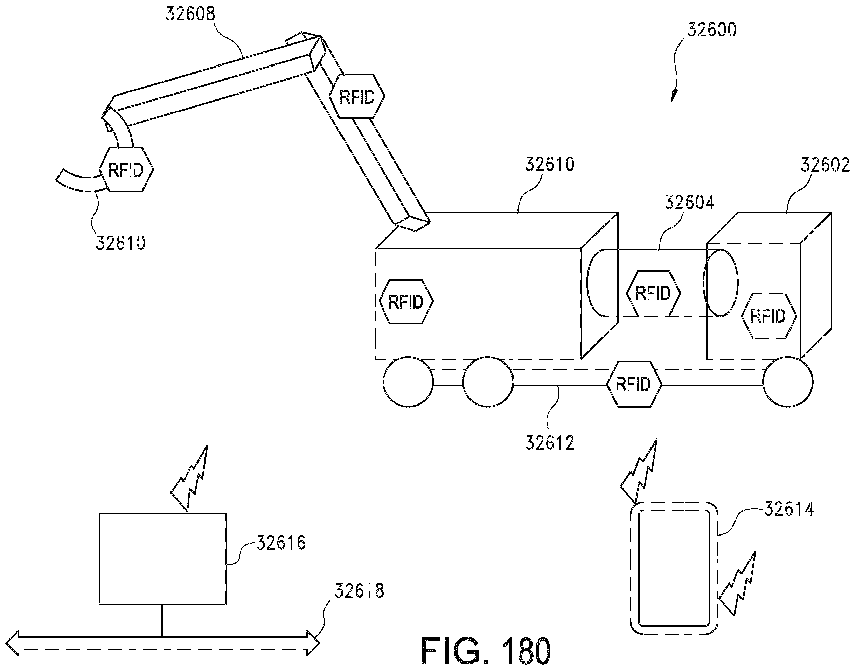

Referring to Figure 180, an industrial machine 32600 may be configured from a plurality of elements, parts, sub-assemblies and the like. One such sub-assembly might include an industrial machine motor 32602. An RFID device may be disposed with the machine that may include details, such as those described herein for smart RFID devices, for the specific motor. The motor 32602 RFID device may communicate, such as through wireless communication with other devices brought into proximity, such as a smart phone, tablet or the like 32614 so that a user of the table and the like 32614 may access the information stored on the motor 32602 RFID device for conducting service, maintenance, testing, and the like. In embodiments, the motor 32602 service procedure may be retrieved from the motor 32602 RFID and displayed via an application executing on the table 32614 to be followed by the service technician. Another such sub-assembly might include an industrial machine drive shaft 32604. An RFID device may be disposed with the machine that may include details, such as those described herein for smart RFID devices, for the specific drive shaft 32604. The drive shaft 32604 RFID device may communicate, such as through wireless communication with other devices brought into proximity, such as a smart phone, tablet or the like 32614 so that a user of the table and the like 32614 may access the information stored on the drive shaft 32604 RFID device for conducting service, maintenance, testing, and the like. In embodiments, the drive shaft 32604 service procedure may be retrieved from the drive shaft 32604 RFID and displayed via an application executing on the table 32614 to be followed by the service technician. Yet another such sub-assembly might include an industrial machine gear box 32606. An RFID device may be disposed with the machine that may include details, such as those described herein for smart RFID devices, for the specific gear box 32606. The RFID device in the gear box 32606 device may communicate, such as through wireless communication with other devices brought into proximity, such as a smart phone, tablet or the like 32614 so that a user of the table and the like 32614 may access the information stored on the gear box 32606 RFID device for conducting service, maintenance, testing, and the like. In embodiments, the gear box 32606 service procedure may be retrieved from the gear box 32606 RFID and displayed via an application executing on the table 32614 to be followed by the service technician. Yet another such sub-assembly might include an industrial machine articulated arm 32608. An RFID device may be disposed with the machine that may include details, such as those described herein for smart RFID devices, for the specific articulated arm 32608. The articulated arm 32608 RFID device may communicate, such as through wireless communication with other devices brought into proximity, such as a smart phone, tablet or the like 32614 so that a user of the table and the like 32614 may access the information stored on the articulated arm 32608 RFID device for conducting service, maintenance, testing, and the like. In embodiments, the articulated arm 32608 service procedure may be retrieved from the articulated arm 32608 RFID and displayed via an application executing on the table 32614 to be followed by the service technician.

Referring further to Figure 180, yet another such sub-assembly might include an industrial machine bucket 32610. An RFID device may be disposed with the machine that may include details, such as those described herein for smart RFID devices, for the specific bucket 32610. The bucket 32610 RFID device may communicate, such as through wireless communication with other devices brought into proximity, such as a smart phone, tablet or the like 32614 so that a user of the table and the like 32614 may access the information stored on the bucket 32610 RFID device for conducting service, maintenance, testing, and the like. In embodiments, another such sub-assembly might include an industrial machine drive train 32612. An RFID device may be disposed with the machine that may include details, such as those described herein for smart RFID devices, for the specific drive train 32612. The drive train 32612 RFID device may communicate, such as through wireless communication with other devices brought into proximity, such as a smart phone, tablet or the like 32614 so that a user of the table and the like 32614 may access the information stored on the drive train 32612 RFID device for conducting service, maintenance, testing, and the like. In embodiments, the drive train 32612 service procedure may be retrieved from the drive train 32612 RFID and displayed via an application executing on the table 32614 to be followed by the service technician. In embodiments, any of the RFID devices, such as the motor 32602 RFID, the drive shaft 32604 RFID, the gear box 32606 RFID, the articulated arm 32608 RFID, the bucket 32610 RFID, the drive train 32612 RFID and the like may communicate via a wireless communication network with an access point, such as industrial machine access point 32616 that may be disposed on the industrial machine 32600 or proximal thereto. Communication from the RFID devices through the industrial machine access point 32616 to gain access to a network 32618, such as a network for connecting other industrial machines in a facility or external networks such as the Internet. Information stored in the industrial machine RFID devices may be transmitted over the network 32618 for use in the predictive maintenance methods and systems described herein.

In embodiments, a system may include a smart RFID element configured to capture and store in a non-volatile computer-accessible memory operational, physical and diagnostic result information for a portion of an industrial machine by communicatively coupling with at least one sensor configured to monitor a condition of the portion of the industrial machine. The smart RFID element may further be configured to receive, organize, and store in the non-volatile memory information that enables execution of at least one service procedure for the industrial machine.

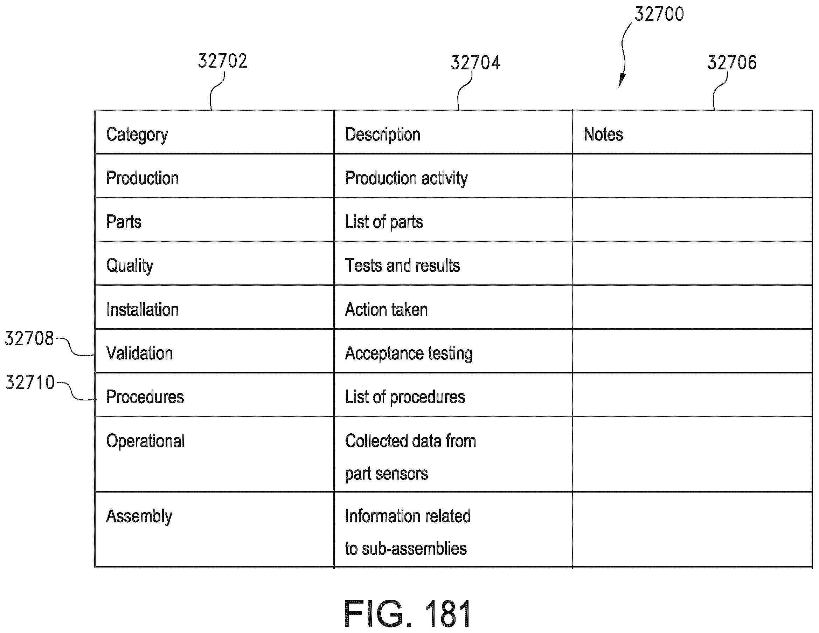

In embodiments, information about an industrial machine, such as about a portion of the industrial machine may be stored in an RFID element disposed with the industrial machine or portion thereof. The information stored may be configured to facilitate rapid random access to any portion of the information quickly and efficiently, such as through use of a smart phone or other computing device configured with at least a web browser and the like. The information may be configured as one or more data structures, such as a hierarchical data structure and the like that may also facilitate exploration of the information through browsing the hierarchy and the like. Referring to Figure 181, an exemplary high level structure 32700 of a portion of such an RFID is presented and includes rows and columns. The exemplary high level structure 32700 may include a category of information 32702 that may identify a general area of information, such as production and the like. Each such category may be described in a description column 32704 that may have further identifying information. A notes column 32706 may be configured with free-form notes that may be updated as needed. In embodiments, the category 32702 may include a range of information categories associated with the industrial machine, such as Production, Parts, Quality, Installation, Validation, Procedures, Operational, Assembly and the like. In an example of the category 32702, validation 32708 may include a list of validation tests that are required and that are performed, along with results. Validation tests may be performed to validate installation at a customer site and the like. Validation 32708 may also include links to one or more procedures accessible in the RFID through the procedures 32710 category that are required for validation.

In embodiments, industrial machine-related information that may be stored on and/or accessible via a smart RFID element may include, without limitation operational data collected by sensors deployed with the industrial machine and collected via the sensor data collection methods and systems described and the references incorporated herein. Other information that may be stored on or accessible from a smart RFID element may include, without limitation detected exceptions in operational and/or test data, such as excess temperatures, unexpected shutdowns, system restarts, and the like. A smart RFID element may communicate with an external computing device, such as a smart phone, tablet, communication infrastructure node, computer, mesh network device, and the like via a range of communication protocols including WiFi, NFC, BLUETOOTH and others. In embodiments, a smart RFID element may communicate wirelessly with a portable computing device when the computing device is in wireless communication proximity, such as when a portable computing device is brought within NFC range of the smart RFID element. A smart RFID element may communicate over a network, such as the Internet as an IoT device. The smart RFID element may send data to a server, such as a web server or the like that may aggregate information from the element and cloud-accessible sources for one or more service activities associated with the industrial machine. In embodiments, a smart RFID element may communicate with external computing device(s) at convenient times, such as at the end/start of an activity, shift, day, when preventive maintenance is soon to be performed, and the like.

A smart RFID element may be used during production and/or assembly of an industrial machine or portion thereof to capture physical details of the machine, such as for bearing frequency, gear teeth count and type, build/assembly version information, build/test parameters, self-test information, calibration information, test time, inventory dwell time, and the like.

A smart RFID element may be used during installation and/or deployment of an industrial machine or portion thereof to capture orientation of the machine, testing activity, start-up activity, validation activity/runs, production start time, installation/deployment/configuration personnel, images of the industrial machine, and the like, at least a portion of which may be determined by one or more installation and/or deployment procedures that may be stored on and/or accessible through the smart RFID element.

In embodiments, a system may include a smart RFID element configured to capture and store in a non-volatile computer-accessible memory operational, physical and diagnostic result information for a portion of an industrial machine by communicatively coupling with at least one sensor configured to monitor a condition of the portion of the industrial machine. The smart RFID element may further be configured to receive, organize, and store in the non-volatile memory information that enables execution of at least one service procedure for the industrial machine. The smart RFID may further be configured to facilitate hierarchical access to information about the industrial machine, including a plurality of portions directly accessible from a root entry for the industrial machine. In embodiments, each of the plurality of directly accessible portions is structured to store entries for one portion selected from the list consisting of production information, parts information, quality information, installation information, validation information, procedure information, operational information, and assembly information.

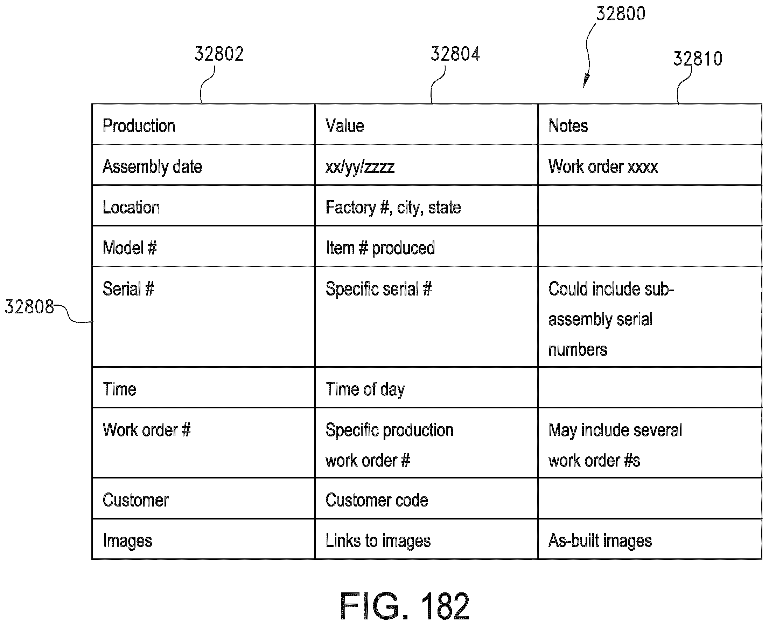

In embodiments, an alternate configuration of a smart RFID for industrial machine information storage and access, such as for service and the like may include a data structure as depicted in Figure 182. Data structure 32800 may be organized as columns and rows as shown, and the like. A first column may be a topic column 32802, such as production topics including, without limitation, date(s) of assembly, location, model number, serial number, time, work order number, customer, images of the industrial machine as built and the like. Each topic in the topic column 32802 may have one or more corresponding values in a value column 32804. In an example, a serial number topic 32808 in the topic column 32802 may have one or more corresponding serial numbers for the specific industrial machine listed in the value column 32804. Comments or other meta data for each topic in the topic column 32802 may be captured in corresponding entries in a notes column 32810.

In embodiments, a system may include a smart RFID element configured to capture and store in a non-volatile computer-accessible memory operational, physical and diagnostic result information for a portion of an industrial machine by communicatively coupling with at least one sensor configured to monitor a condition of the portion of the industrial machine. The smart RFID element may further be configured to receive, organize, and store in the non-volatile memory information that enables execution of at least one service procedure for the industrial machine. In embodiments, the production portion may include entries for assembly date, assembly location, machine model number, machine serial number, machine assembly time, machine assembly work order number, customer, and images of portions of the industrial machine.

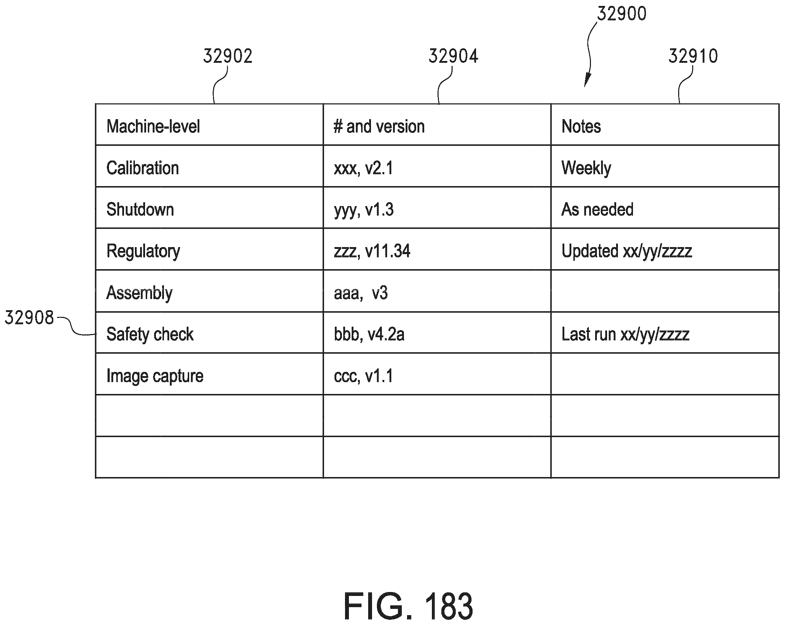

In embodiments, an alternate configuration of a smart RFID for industrial machine information storage and access, such as for service and the like may include a procedure data structure as depicted in Figure 183. A machine-level procedure data structure 32900 may be organized as columns and rows as shown, and the like. A first column may be a procedure column 32902 that may list machine-level procedures, such as calibration, shutdown, regulatory compliance, assembly, safety-checking, image capture and the like. Each procedure in the machine-level procedure column 32902 may have one or more corresponding values in an attribute column 32904, such as a procedure identification number, a version, and the like. In an example, a safety check procedure 32908 entry in the procedure column 32902 may have one or more corresponding procedure number(s) and corresponding version number(s) in the column 32904. Comments or other meta data for each procedure in the procedure column 32902 may be captured in corresponding entries in a notes column 32910.

In embodiments, a system may include a smart RFID element configured to capture and store in a non-volatile computer-accessible memory operational, physical and diagnostic result information for a portion of an industrial machine by communicatively coupling with at least one sensor configured to monitor a condition of the portion of the industrial machine. The smart RFID element may further be configured to receive, organize, and store in the non-volatile memory information that enables execution of at least one service procedure for the industrial machine. In embodiments, the procedure portion may include entries for procedures selected from the list consisting of calibration, shutdown, regulatory, assembly, safety check, image capture, preventive maintenance, part repair, part replacement, and disassembly.

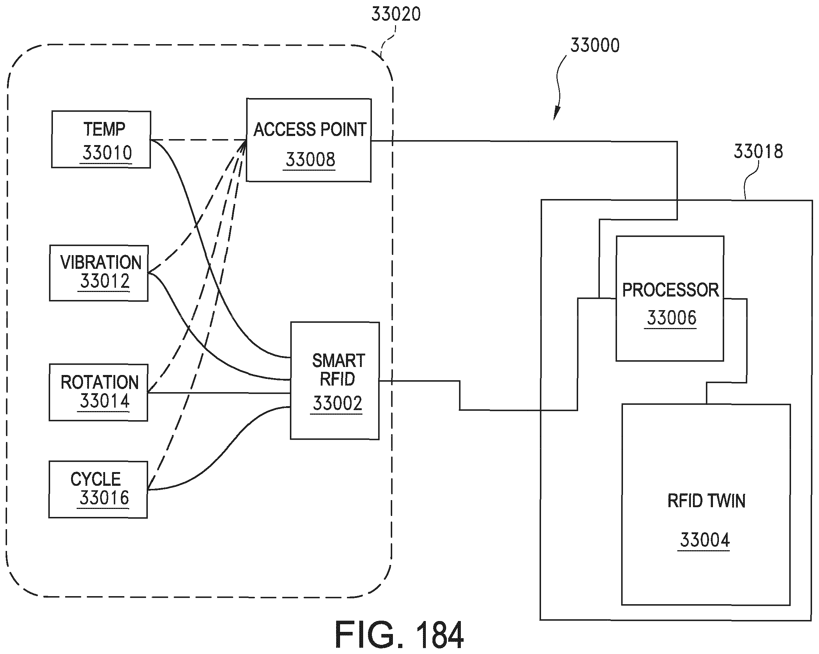

In embodiments, referring to Fig. 184, methods and systems for collecting information 33000 about an industrial machine 33020, such as information about the machine operation, conditions, and the like may be beneficial to industrial machine predictive maintenance methods and systems, such as those described herein and elsewhere. In embodiments, collecting the information from sensors on an industrial machine may include routing the collected information through one or more access points 33008 to a networked server 33018 where the information may be processed and stored. In embodiments, collecting information from sensors on an industrial machine may include communicating between sensors and a smart RFID device 33002 disposed on or with the machine. Data from sensors, such as temperature sensors 33010, vibration sensors 33012, rotation sensors 33014, operational cycle sensors (e.g., cycle counters and the like) 33016 may be provided to a smart RFID device 33002 where the information may be processed and stored for further access by an external device, such as the server 33018, a handled device (not shown) brought into communication proximity of the industrial machine 33020, and the like. Industrial machine-specific data may be collected from the sensors and routed to one or more web servers 33018 that may employ a processor 33006 to generate a digital twin 33004 of the smart RFID 33002 on a computer accessible memory other than the smart RFID 33002. In embodiments, the digital twin 33004 may be generated by copying content in the smart RFID 33002. Likewise, machine-specific sensed data may be copied from the RFID twin 33004 memory to the smart RFID device 33002. Therefore, the RFID twin 33004 may be a copy of the smart RFID 33002, may be created independently of the smart RFID 33002, while maintaining a compatible structure, format, and substantively identical content, or may be a source of machine-specific data (e.g., as provided from the sensors over the access point) that may be copied to the smart RFID 33002 to maintain a copy of the information on the machine. In embodiments, server 33018 may maintain a digital twin of a plurality of smart RFID devices for a plurality of industrial machines, including multiple smart RFID devices for a single industrial machine and the like.

In embodiments, a system may include a smart RFID element configured to capture and store in a non-volatile computer-accessible memory operational, physical and diagnostic result information for a portion of an industrial machine by communicatively coupling with at least one sensor configured to monitor a condition of the portion of the industrial machine. The smart RFID element may further be configured to receive, organize, and store in the non-volatile memory information that enables execution of at least one service procedure for the industrial machine. In embodiments, the system above may also include a data storage element accessible through a processor, the data storage element comprising a copy of information stored in a plurality of the smart RFID element. In embodiments, each copy of information comprises a twin of the information stored in the corresponding smart RFID.

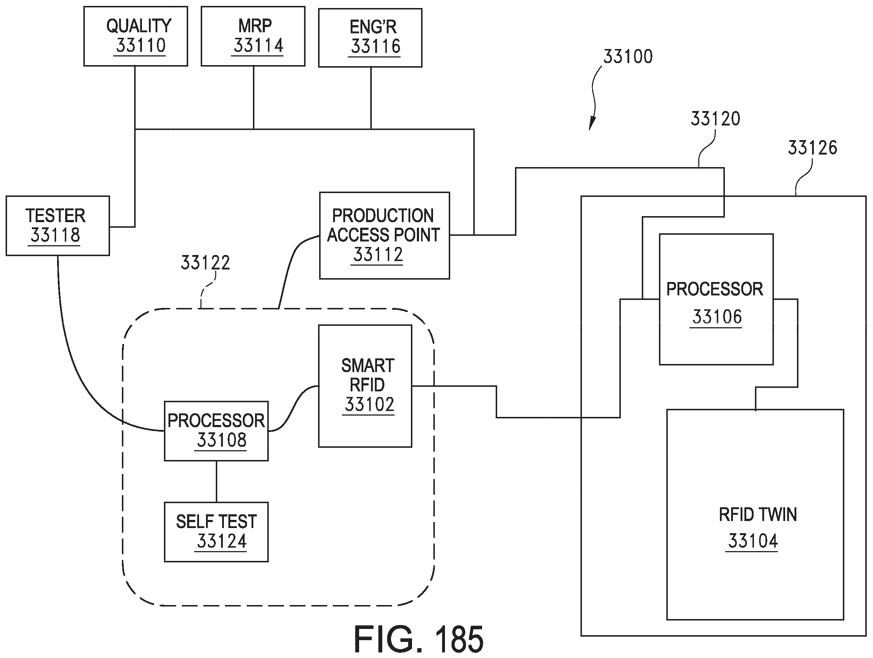

In embodiments, industrial machine predictive maintenance methods and systems, such as those described herein may include use of one or more machine-resident smart RFID data structures that may capture information related to planning, engineering, production, assembly, testing and the like of portions of the industrial machine. Embodiments 33100 that may facilitate capturing information from these processes may be depicted in Figure 185. An industrial machine 33122 may comprise several elements, such as operational elements, structural elements, processing elements, and at least one smart RFID element 33102. During production of the industrial machine 33122, an industrial machine-resident processor 33108 may work cooperatively with self-test elements 33124 and the like to perform testing of the industrial machine. Data collected during self-testing, such as confirmation of proper operation and the like may be stored in the smart RFID element 33102, such as by the processor writing this data into a memory of the smart RFID element 33102. In embodiments, a production test system 33118 may also perform testing of portions of the industrial machine 33122, the results of which may be stored on the smart RFID element 33102. The industrial machine 33122 may communicate with a production network 33120, such as an intranet and the like during production to gather and/or provide information for various production systems, such as quality systems 33110, manufacturing resource and planning (MRP) systems 33114, production engineering systems 33116 and the like. Information, such as parts lists, production information, and the like, an example data structure of which is depicted in Figure 182, may be stored with the smart RFID element 33102, such as by the industrial machine 33122 communicating over the production network 33120 via a production access point 33112 and the like. Information from the various production systems, quality 33110, MRP 33114, engineering system 33116, testing 33118 and the like may be transferred over the network 33120 to the smart RFID element 33102. In embodiments, a networked server 33126 may communicate with at least a portion of these production systems over the network 33120 to, for example capture and process with a processor 33106 relevant production information to be stored in the smart RFID element 33102 and/or in a data structure in a memory accessible to the server 33126. A data structure 33104 may include at least a portion of the information stored in the smart RFID element 33102. In embodiments, the data structure 33104 may be a digital twin of at least the relevant production content of the smart RFID element 33102 for the specific industrial machine being produced. In embodiments, data from the production systems may flow through the network 33120 to the server 33126 and may optionally be processed there, such as to be formatted, encoded, and the like and delivered, such as over a wireless connection to the industrial machine 33122 for storing with the smart RFID 33102. Production systems may include the quality control systems 33110 that may include capturing images of parts, sub-assemblies, and portions of the industrial machine. Images captured may be processed with machine vision and other image analysis technologies to validate assembly and the like. These images, image analysis data derived from these images, and the like may be stored so that it may be accessed through the smart RFID element 33102. In an example, procedures such as test procedures used in production may be useful for testing the industrial machine 33122 as part of a deployment process. These procedures may be communicated from one of the production systems, such as the engineering system 33116 over the production network 33120, eventually to be stored on the smart RFID 33102, the digital twin 33104 or both. This may satisfy a goal of the methods and systems described herein of facilitating access to industrial machine-specific procedures via a smart RFID element on each industrial machine.

In embodiments, production information stored in, for example the smart RFID element 33102 may be useful to procedures that are to be followed during installation, calibration, repair, preventive maintenance and the like. In an example, certain test results may indicate an operational margin (e.g., maximum and/or minimum values) verified during production. These results may be useful during validating testing of a deployment of the industrial machine to facilitate confirming the deployment continues to meet expectations. By making this and other production and industrial machine information available during installation and other deployed procedures, the machine-resident smart RFID element 33102 reduces interdependency of production and related systems once an industrial machine leaves the production environment. In an example, a procedure for testing a portion of the industrial machine may be stored in the smart RFID element. Test results that correspond to that procedure may also be stored therein. Therefore, even if the specific procedure is modified for subsequently produced industrial machines, it may be possible to perform tests associated with the specific procedure used to produce the specific industrial machine; thereby saving time and confusion that may occur when a new test procedure is used, but old procedure test results are expected to be met.

In embodiments, a method of configuring production data in a smart RFID of an industrial machine may include configuring a smart RFID with a portion of an industrial machine to capture and store in a non-volatile computer-accessible memory operational, physical and diagnostic result information for a corresponding portion of the industrial machine. The method may include communicatively coupling the smart RFID with a processor of the industrial machine and at least one sensor configured to monitor a condition of the portion of the industrial machine. The method may further include executing with the processor a self-test of the portion of the industrial machine and storing in the smart RFID a result of the self-test. The method may yet further include coupling the industrial machine through a production access point to a network of testing systems and an industrial machine production server. The method may further include performing production tests on the portion of the industrial machine with the testing systems, a result of which is stored in duplicate on the smart RFID and in a data storage facility accessible by a processor of the production server. In embodiments, the duplicate of the testing results stored in the data storage facility may be a twin of the corresponding portion of the smart RFID.

In embodiments, a marketplace of industrial machine parts, services, tools, materials and the like may be maintained through a combination of a CMMS control system, and third parties each providing information about services, parts, tools, materials, costs, and logistics that they provide. Such a marketplace may be cloud-based so that access to this information, can be made available to participants including industrial machine owners and the like. In embodiments, a representative embodiment is depicted in Figure 186. A CMMS system 33202 for managing at least part and service orders for required services may act as a control gateway to a marketplace 33212 for industrial machine owners 33224 and the like. The CMMS system 33202 may include managing bids and orders for parts, service, tools, materials and other aspects of industrial machine service and maintenance. Exemplary CMMS subsystems, systems, facilities and the like are described elsewhere herein. In the embodiment of Figure 186, the CMMS system 33202 may further maintain and update order history details 33210. These details may include information descriptive of the parts, services, and the like that may be ordered. Details may include historical pricing, logistics requirements and costs, order lead times, and other factors that may be useful when managing information in the marketplace 33212. In an example, a part supplier 33208 may offer a part for sale in the marketplace. Historical pricing for the part based on the order details 33210 may be used to recommend a price at which the part supplier 33208 should offer the part. In another example, the part supplier 33208 may offer availability of a part with a 2-day lead time. However, the historical details 33210 may indicate that this supplier 33208 is underestimating the time required to provide the part and may facilitate incorporating a proper lead time when placing the order so that the part can be ordered only when needed but with sufficient lead time for it to be available when a service that requires the part is scheduled to be performed. Such information management may be implicit management because it is based on actual performance rather than mere statements by a provider.

In embodiments, service providers 33206 may configure offering for a set of services 33216 that meet their technical expertise. The service providers 33206 may directly configure and update this set of services over time so that it reflects the services available from each individual service provider 33206 over time. Likewise, the parts supplier 33208 may configure and maintain a list of parts 33214 for industrial machines that the supplier offers. Information such as availability (e.g., local inventory, lead time, and the like) may be directly maintained by the parts supplier 33208. The CMMS system 33202 may access his and related information in the marketplace 33212 when configuring an order for parts, services, and the like. Similarly, suppliers of tools may configure information regarding industrial machine service tools 33220 and suppliers of materials may configure and maintain information regarding industrial machine service materials 33222 (e.g., lubricants, other consumable items, and the like).

In embodiments, parts manufacturers 33204 may also provide and maintain information regarding parts that they provide, such as replacement parts, add-ons, upgrades, complete systems, subsystems, accessories and the like to the marketplace.

In embodiments, a logistics suppliers 33218, such as shippers and the like, may provide and maintain a set of logistics services in the marketplace that they provide for industrial machine maintenance parts, services and the like. The logistics supplier 33218 may offer delivery services in different geographic regions and may use information such as location of the industrial machine to establish rates and services available in the relevant region.

In embodiments, an industrial machine predictive maintenance system may form a marketplace that includes a plurality of parts supplier computing systems configured to maintain industrial machine service marketplace information about industrial machine parts offered for sale. The marketplace may include a plurality of service provider computing systems configured to maintain industrial machine service marketplace information about industrial machine services offered. The marketplace may further include at least one computerized maintenance management system (CMMS) that is configured to facilitate access to at least one of services, parts, materials, and tools offered in the marketplace responsive to an industrial machine maintenance recommendation provided by an industrial machine predictive maintenance system. The marketplace may yet further include a plurality of logistics provider computing systems configured to maintain industrial machine service marketplace information for at least one of shipping and logistics services offered in the marketplace. Further in embodiments, each of the plurality of parts suppliers, service providers, and logistics providers maintain corresponding information for their offerings directly in the marketplace via at least one Application Programming Interface of the marketplace. The market place may further include a CMMS that adapts offerings of parts, services, and logistics to industrial machine owners based on norms established from analysis of prior orders for parts, services and logistics.

In embodiments, a distributed ledger for tracking field service activities, including predicative maintenance activities and the like that are performed on industrial machines is depicted in FIG 187. Methods and systems that are disclosed herein for an industrial machine maintenance distributed ledger may include a distributed ledger 33302 supporting the tracking of predictive maintenance activities executed in an automated industrial machine predictive maintenance eco-system 33300. Embodiments may include a self-organizing data collector 33308 that is configured to distribute collected information to the distributed ledger 33302. Embodiments may include a network-sensitive data collector that is configured to distribute collected information to a distributed ledger based on network conditions. Embodiments may include a remotely organized data collector that is configured to distribute collected information to a distributed ledger based on intelligent, remote management of the distribution. Embodiments may include a data collector with self-organizing local storage that is configured to distribute collected information to a distributed ledger. Embodiments may include the system 33300 for industrial machine maintenance-related data collection in an industrial environment using a distributed ledger for data storage and self-organizing network coding for data transport. In embodiments, data storage may be of a data structure that supports a haptic interface for data presentation, a heat map interface for data presentation, and/or an interface that operates with self-organized tuning of an interface layer.

In embodiments, storage of service and maintenance information, which may include services, parts, service providers, records for specific industrial machines, analytics generated from the service and maintenance information and the like may include the one or distribute ledger 33302 instances in various elements of the system 33300. In an example, the distributed ledger 33302 may facilitate access to all of the information available in the distributed ledger 33302 without relying on any one network server, node, or the like due at least in part to some portion of the information being distributed and optionally duplicated on distinct portions of a network, such as the Internet. The distributed ledger 33302 may be distributed among elements in an industrial machine maintenance platform including, without limitation, the industrial machine data analysis system 28602, the industrial machine predictive maintenance subsystem 28616, the CMMS system 28622, the service delivery and tracking system 28630, the industrial machine 33304, the industrial facility computing system 33306, the cloud-based storage 33316, and the like.

In embodiments, information stored in the distributed ledger 33302 may be generated by and/or adjusted based on artificial intelligence 33310, such as machine learning algorithms that process the information from which the distributed ledger is sourced.

In embodiments, the methods and systems that may support distributed ledger embodiments may include role-based access control 33314 of and to the distributed ledger data. Exemplary roles 33312 that may be managed by a distributed ledger control facility may include: an owner role, which may be an industrial machine leasing company, individual or direct-use buyer entity or individual; an operator role, which may be an entity or individual that is responsible for day to day operation of an industrial machine, such as a company that provides a service using the industrial machine, a lessor of the machine, and the like; a lessor role, which may be an entity or individual that has a term-based or otherwise limited lease of an industrial machine; a manufacturer role, which may be an entity or individual that produced some portion of the machine and that may have limited access to, for example, information pertaining to the portion produced; a part supplier role, which may be an entity or individual that provides some part(s) for manufacturer, service, upgrade, maintenance, refurbishing, or other functions and may provide OEM and/or aftermarket parts for an industrial machine; a service provider, which may be an individual or entity that provides services, such as contracts for preventive maintenance and repair, emergency repair, upgrades and the like; a service broker role, which may be an entity or individual that facilitates service needs, such as a regional entity that facilitates automated service activities in regions, such as specific countries and that may be required to be licensed, registered, and the like in the specific country and that may act comparably to a general contractor, providing oversight and warranty for work done by 3rd parties, such a role may be valuable when a machine has been installed per local rules, and the like that is outside of the scope of what an automated service identification system may handle; a regulatory role, which maybe a government or other authority entity or individual that may conduct inspections and the like and may be limited to access certain data required for ensuring compliance with regulations and the like for activities such as preventive maintenance, use of authorized parts/service providers, auditing, and the like.

In embodiments, a predictive maintenance platform may use a secure architecture for tracking and resolving transactions, such as a distributed ledger. In embodiments, transactions in data packages are tracked in a chained, distributed data structure, such as a Blockchain™, allowing forensic analysis and validation where individual devices store a portion of the ledger representing transactions in data packages. The distributed ledger may be distributed to IoT devices, to web servers, to industrial machine maintenance transaction record storage facilities, and the like, so that maintenance and related information can be verified without reliance on a single, central repository of information. The platform may be configured to store data in the distributed ledger and to retrieve data from it (and from constituent devices) in order to resolve service transactions, such as parts and service orders, and the like. Thus, a distributed ledger for handling data for maintenance-related transactions is provided. In embodiments, a self-organizing storage system may be used for optimizing storage of distributed ledger data, as well as for organizing storage of packages of data, such as IoT data, industrial machine maintenance data, parts and service data, knowledgeable worker data, and the like.

In embodiments, a system may include a plurality of computing systems configured to perform one or more predictive maintenance actions. In embodiments, a portion of the plurality of computing systems connected via a peer-to-peer communication network. A record of industrial machine maintenance actions including a portion of the predictive maintenance actions may be maintained by the portion of the plurality of computing systems as a distributed ledger. In embodiments, a computing system of the portion of computing systems performs at least one industrial machine maintenance role selected from the list consisting of industrial machine data analysis, industrial machine predictive maintenance recommendations, industrial machine maintenance order management, delivery and tracking of service actions, industrial machine service scheduling, and contributes a result of it performing the at least one industrial machine maintenance to the record.

In embodiments, a system may include a plurality of computing systems configured to perform one or more predictive maintenance actions. In embodiments, a portion of the plurality of computing systems are connected via a peer-to-peer communication network. In embodiments, the system may further include a role-based control facility for accessing a record of industrial machine maintenance actions, the record including a portion of the predictive maintenance actions. In embodiments, the portion of the plurality of computing systems operate the record as a distributed ledger.

In embodiments, methods and systems for operating a predictive maintenance analysis and control system may benefit from visual information as well as performance and operational data from industrial sensors and the like deployed with an industrial machine. Visual information, such as images captured about individual parts, assemblies, process steps, machine conditions and the like may be analyzed with machine vision and other techniques, including human viewing and assessment, to determine conditions that may impact prediction of a service need or the like. Generating and maintaining an updated accurate image library of visual information for industrial machines may be benefited from service personnel capturing images of portions of each industrial machine under various conditions, including without limitation operating, testing, and non-operating conditions (e.g., during service, maintenance, repair, upgrade, and refurbishing machine states). In embodiments, a system to facilitate capture of images is depicted in Figure 188. A procedure for industrial machine service or repair 33416 may be identified for a scheduled service of the machine. The procedure 33416 may include a set of steps to be taken to perform the scheduled service activity. One or more of the steps may include capturing image(s) of portions of the industrial machine, such as an external view depicting the machine in its deployed environment, a view of a part to be replaced, a view depicting a condition of gears, bearings, support structures, housings and the like. While a procedure may include capturing image(s), learning from service technicians performing the procedure may be incorporated into implementing the procedure using a preventive maintenance system 33424 that uses machine learning and other techniques to facilitate augmenting and/or adjusting image capture steps in a procedure and the like. The predictive maintenance system 33424 may provide information, such as in the form of conditions that suggest an image should be captured that may not be directly required in a procedure. Such a case may arise when the predictive maintenance system 33424 learns that certain bearings exhibit wear that is visible before the bearing fails. The length of time that a bearing can operate under various conditions may not be a sufficient indicator to perform a service, whereas an image with visual indication of such wear would be sufficient. Therefore, when a service technician performs a service procedure that does not include capturing an image of the certain bearings, the technician may be directed to capture an image of these certain bearings. This may be indicated to the service technician as a service alert, such as a general posting. However, information about the visual condition and timing of a service activity may be used to facilitate augmenting / updating a procedure, such as the procedure 33416 to include capturing one or more images of the certain bearings.

In embodiments, information from the predictive maintenance system 33424 may be processed by an image capture triggering facility 33422 to provide an indication to a procedure updating facility 33402 that an update to the procedure, such as to add capturing an image of the certain bearings, is required. This indication may be combined with image capture timing information that may be provided to the procedure update facility 33402 from an image capture timing facility 33420 that may use industrial machine use and service schedule information 33426 to create a window of time in which the certain bearings are expected to be available to be imaged. Such a window of time may include scheduled service and/or maintenance activities during which the machine may be off-line. Such a window of time may include planned operational times during which the machine will be operating. A potential goal of such window generation may be to capture image(s) of the certain bearings during a planned service visit, to avoid machine shut downs specifically to capture the image(s), despite the images being required before a service activity in which the bearings would normally be images is executed, such as a scheduled preventive maintenance activity to inspect the bearings and the like.

In embodiments, when the existing procedure 33416 is to be applied during an image capture window output from the image capture timing facility 33420, the image capture triggering facility 33422 output may be checked. If the image capture triggering facility 33422 indicates that an image is required, the procedure may be updated by the procedure update facility 33402, such as by adding a step to the procedure, changing an imaging target (e.g., from a part to the bearings) for an existing image capture step, and the like.

In embodiments, the revised procedure 33402 may be followed by the service technician. When a step that has been added/augmented to capture an image of the certain bearings is to be performed, an image capture template 33404 may be presented to the technician to aid in capturing the proper image. Likewise, and as described elsewhere herein, an augmented reality application may be executed as part of such an image capture step to further aid the service technician in capturing the proper image. In embodiments, a machine vision system 33408 and other image analysis techniques may be used to suggest refinements and/or confirm the captured image meets the requirements for facilitating detecting the visual condition of the certain bearings, and the like.

In embodiments, an image capture reward facility 33414 may interface with the updated procedure 33418 and/or the service technician to facilitate incentivizing the service technician to capture an acceptable image. Such a reward facility 33414 may include a range of rewards from direct monetary rewards to positive ratings for the service technician, which may ultimately increase the technician's value and consequently compensation.

Captured images, such as those that are accepted by the machine vision system 33408 and the like, may be stored in a smart RFID element 33410 of the industrial machine, transferred through the image capture device (e.g., a camera-enabled smart phone, and the like) to the Smart RFID and to one or more nodes in a distributed ledger of preventive maintenance data.

In embodiments, a method of image capture of a portion of an industrial machine includes updating a procedure for performing a service that implements a predicted maintenance action on an industrial machine, the updating responsive to a trigger condition for capturing an image of a portion of the industrial machine being met. The method of image capture may further include providing an image capture template in an electronic display overlaying a live image of a portion of the industrial machine to facilitate image capture, applying augmented reality that indicates a degree of alignment of the live image with the template, examining an image captured using the updated procedure with machine vision to determine at least one part of the machine present in the captured image, and responsive to a result of the machine vision examination, operating an image capture reward facility to generate a reward for the captured image. In embodiments, the updating may be responsive to a trigger condition that is based on analysis of industrial machine failure data such that the analysis suggests capturing an image that is not specified in the procedure prior to the updating step. In embodiments, the updating may be responsive to the procedure for performing the service being performed on an industrial machine that meets a predictive maintenance criterion associated with the portion of the industrial machine for which an image is to be captured. In embodiments, the trigger condition may include a type of industrial machine associated with the industrial machine for which a service procedure is being performed and a duration of time since the portion of the industrial was captured in an image.

In embodiments, an industrial machine predictive maintenance facilitating system may apply machine learning to images of industrial machines captured during operations such as assembly, testing, servicing, repair, upgrading, scheduled maintenance, preventive maintenance, and the like. The machine learning may be applied to the images and/or data derived from the images using algorithms such as image analysis algorithms, part detection algorithms, machine vision and the like to facilitate improving machine-automated detection of portions of the industrial machine, such as individual parts, subassemblies and the like. In embodiments, machine-automated detection of parts, subassemblies and the like may provide information to the methods and systems here including, without limitation, predictive maintenance processes, service provider rating methods, procedure rating methods, inventory management systems, maintenance scheduling (e.g., if a maintenance operation should be scheduled sooner than previously estimated, and the like).

In embodiments, methods and systems for machine-automated detection of parts of an industrial machine may include image capture, processing, analysis, learning and automation steps, such as those exemplarily depicted in Figure 189. In embodiments, a method for automatically detecting parts of an industrial machine may start with capturing an image step 33502. Alternatively, image data from previously captured images may be accessed from a data store of images, such as a database and the like. The image capture step 33502 may be performed, such as by a service technician and the like in association with performing a service operation, such as a maintenance procedure, repair procedure, upgrade procedure and the like. The image capture step 33502 may be informed by a procedure or the like that may indicate a target part to be imaged, a template thereof, and the like. A procedure, target part, template and the like may be retrieved from an image capture guidance data storage 33504. In embodiments, a procedure may include a specific instruction to use a part image capture process and photograph one or more parts indicated by the procedure. In an example, a procedure for servicing bearings of an industrial machine may include a step of photographing a shaft that the bearings handle and the like. The procedure may present on an electronic display of an image capture device, such as a tablet or smart phone and the like an image representative of the image to be captured. Such an image may be a most recent image captured of the specific industrial machine that may, for example, be retrieved from an image data structure of a smart RFID element deployed with the industrial machine (e.g., a smart RFID element configured with the portion of the machine that includes the bearings, shaft and the like). Such an image may be augmented with information, such as relative position of the camera through which the image was captured, time/date information, procedure number followed, and the like. In embodiments, such an image may be processed into a template (e.g., coloring book / outline image, and the like) that facilitates manually aligning the image capture device. In embodiments, such a template may be an active template that processes an image visible through the image capture device and provides indicators, such as color changes and the like of the template to further facilitate alignment of the image capture device. The active template may start with black (or some other color) outlines of the object(s) to be captured with vertexes, edges, and the like turning green (or some different color) when alignment of the relevant vertex, edge and the like is sufficient to facilitate machine-automated detection of the part.

In embodiments, an image captured in the image capture step 33502 may be processed through an image validation step 33506 that may perform image analysis functions, such as for example comparing the image captures with a reference image, such as one that may be retrieved from or derived from information in the image capture guidance data store 33504 and the like. In embodiments, the captured image may be processed to improve contrast and the like and compared during the validate image capture step 33506 with a most recently captured image from the smart RFID element disposed with the industrial machine through, for example an image subtraction process, to determine if the captured image may be validated. An image that is not validated may be discarded and the user may be directed back to the capture image step 33502 to capture another image.

In embodiments, an image that may be validated in step 33506 may be passed onto an image analysis or a similar step 33508 that may process image analysis rules 33510 to detect one or more candidate parts from the validated image. Candidate parts may be stored in a candidate parts data structure 33514 for further use. In embodiments, images of candidate parts in the candidate parts data structure 33514 may be retained for further training of machine learning algorithms that facilitate improving machine automated part detection from images. In embodiments, images of candidate parts may be used in an instance of the machine automated parts detection flow 33500 of Figure 189 and then discarded, erased, and the like. In embodiments, the image analysis rules 33510 may include data provided from the machine learning step 33520, such as in the form of feedback and the like that may improve image analysis of marginal images, such as those with poor contrast, unexpected content (e.g., excessive solvents, moving parts, reflective parts, and the like).

In embodiments, the one or more candidate parts of the candidate parts data structure 33514 may be processed by a parts recognition algorithm step 33516 that may perform, among other things, machine automated parts recognition. An automated parts recognition algorithm may include generating attributes of candidate parts, such as dimensions and the like that may be compared with part descriptive information that may be retrieved from a smart RFID data storage 33512, and the like. In an example, a candidate part may be processed to detect edges and the like that may be processed with automated measurement algorithms. The resulting measurements may be used to determine a specific part from a library of parts for the specific industrial machine that may be available to the parts recognition algorithm 33516 in the RFID data storage 33512 and the like. The specific part information may be retrieved from a production data system, such as a parts list, MRP system and the like and stored in the RFID data storage 33512 during a production operation, such as the exemplary production flow depicted in Figure 185.

In embodiments, one or more results of the parts recognition algorithm 33516 may be forwarded to a machine learning facility, that may execute one or more machine learning algorithms 33520 that may improve various aspects of machine-automated part detection including, without limitation, the image capture process 33502, the image validation process 33506, the image analysis process 33508, the part recognition process 33516 and the like. In an example, part recognition process 33516 may provide images of one or more candidate parts, a corresponding reference part, related attributes and the like, information extracted during the parts recognition process, and the like to the machine learning process 33520. The machine learning process may apply machine learning techniques to facilitate determining aspects of candidate part(s) that represent the best candidates for the corresponding reference part and provide feedback to at least the part recognition process 33516 to improve part detection and the like.

In embodiments, information descriptive of recognized parts may be stored in an updated smart RFID element 33518, an updated server-based data structure 33522 comparable thereto, and the like. Information stored may include one or more candidate part images, an identifier of a reference part, recognition data, procedure number followed to capture the image, and the like.

In embodiments, a method of machine learning-based part recognition may include applying a target part imaging template to an image validating procedure that determines if an image captured meets an image capture validation criterion. The method may further include performing image analysis by processing a captured image with image analysis rules that facilitate detecting candidate parts of an industrial machine being present in an image. In embodiments, recognizing one or more parts of the set of candidate parts as a part of the industrial machine based on similarity of a candidate part with images of parts of the specific industrial machine may be included. Additionally, adapting at least one of the target part template, the image analysis rules, and the part recognition based on feedback produced from machine learning of the recognized parts, thereby improving at least one of image capture, image analysis and part recognition may be included in the method.

In embodiments, information gathered and generated for industrial machine maintenance lifecycles, including predictive maintenance, manufacturer required maintenance, failure repairs, parts and service offerings and ordering, follow-up to maintenance activities, assessment of procedures and service providers, failure rate and prediction analysis, worker training, experience, and ratings, and the like may be captured throughout the service lifecycle, processed with artificial intelligence and other machine learning-type algorithms and accumulated in a database, such as a data model, linked database, columnar database, and the like. Figure 169 depicts such a set of data embodied as a knowledge graph 33602. In embodiments, information about industrial machines, such as parts, images, configurations, internal structures, use schedules, and the like may be processed by artificial intelligence-type functions 33606 (e.g., machine learning algorithms and the like) along with information from other sources including without limitation service information, failure information, worker-related information and the like. The information processing algorithms, such as information associative algorithms executed in exemplary artificial intelligence facility 33606 may cause portions of the predictive maintenance and industrial machine service knowledge graph 33602 to be updated, such as by establishing, changing, removing, strengthening and the like knowledge graph node links 33616 among data nodes 33618; adding, updating, splitting and the like the data nodes 33618 to initiate and refine a graph-based understanding of the relationships among facts, know-how, analysis results and the like that influence aspects of predictive maintenance processes, such as those described herein.

In embodiments, information about machines may be processed and stored in machine data nodes 33608; information about failures may be processed and stored in failure data nodes 33610; information about industrial machine service may be processed and stored in service data nodes 33612, information about workers for performing industrial machine service may be processed and stored in worker data nodes 33614. Relationships among data nodes, such as a relationship between the machine data node 33608 and the service data node 33612 may be depicted as the links 33616 between nodes. A goal of initiating and updating such a knowledge graph, among other things may be to further improve for collecting, discovering, capturing, disseminating, managing, and processing information about industrial machines, including factual information (such as about internal structures, parts and components), operational information and procedural information, including know-how and other information relevant to maintenance, service and repairs.

In embodiments, as maintenance/service/repair/upgrade/installation and other industrial machine-related activities are performed, data about the activities may be processed and used to enhance, augment, improve, refine, clarify, and correct the data nodes 33618, the relationships among the nodes, and the like. In embodiments, preparing for maintenance/service/repair and other industrial machine activities may benefit from the knowledge found in the knowledge graph 33602 and thereby improve efficiency, reduce computing complexity to generate suitable service options, recommendations, orders and the like by taking, for example an existing relationship between the failure node 33610 and the worker node 33614 to efficiently identify a suitable worker for resolving the failure when it occurs on a specific machine.

In embodiments, improved methods and systems are provided herein for collecting, discovering, capturing, disseminating, managing, and processing information about industrial machines, including factual information (such as about internal structures, parts and components), operational information and procedural information, including know-how and other information relevant to maintenance, service and repairs. These improved methods and systems may be provided with a predictive maintenance knowledge system platform 33700 as depicted in Figure 191. A predictive maintenance knowledge system 33702 may facilitate collecting, discovering, capturing, disseminating, managing, and processing information about industrial machines, such as for facilitating service and maintenance thereof using the methods and systems described herein, including without limitation finding a set of workers having relevant know-how and expertise about maintenance, service and repair of a particular machine and finding, ordering, and fulfilling orders for relevant parts and components, so that maintenance, service and repair operations can occur seamlessly, with minimal disruption, and the like. The predictive maintenance knowledge system 33702 may interface with one or more predictive maintenance knowledge bases and/or knowledge graphs 33704. A knowledge base 33704 may further include or reference one or more knowledge graphs that may contain information beneficial to the methods and systems that may be enabled by the predictive maintenance knowledge system 33702. The predictive maintenance knowledge graph may contain or provide computer access to information about industrial machines, service activity of industrial machines, costs (e.g., historical, trending, and predictive) for parts, materials, tools, and services of industrial machines, algorithms and functionality for operating the predictive maintenance knowledge system 33702, platform 33700 and the like. In embodiments, the predictive maintenance knowledge system 33702 may process information from the predictive maintenance knowledge base 33704 regarding expedited service charges that have been imposed on certain instances of industrial machine service and develop a price-time relationship that may aid in the decision by industrial machine owners regarding service authorization and costs thereof. An industrial machine owner may be informed of the costs for expedited service and standard timing service to facilitate deciding if it is better to pay an expedite fee to have a maintenance function performed soon while the machine is off-line for other reasons than to keep a schedule of the maintenance function that would require taking the machine off-line, such as in the near future. The predictive maintenance knowledge system 33702 may facilitate coordination with service providers, parts providers, material and tool providers and the like based on the owner's decision so that the service can be performed in the timeframe that the owner chooses.

In embodiments, specific industrial machine information may be stored in one or more smart RFID elements 33706 disposed with the specific machine and/or stored in a cloud-based data structure 33708 that may be compatible with (e.g., a backup, duplicate/twin, or other formatted data structure). The predictive maintenance knowledge system 33702 may access (e.g., read data from and/or write data to) the RFID element(s) 33706, the cloud-based data structure 33708, and the like. Data read from the smart RFID 33706 / cloud-based structure 33708 may be specific to a particular deployed industrial machine and may facilitate the methods and systems for predictive maintenance and the like described herein performing coordination of resources to perform maintenance effectively and efficiently for the specific machine. In an example, a specific industrial machine may have an operating cycle that results in greater utilization of one of its moving parts (e.g., an industrial motor) than typical. This knowledge may be used by the predictive maintenance knowledge system 33702 to interact with service, parts, and material suppliers to provide a firm quote for performing a utilization-based maintenance service at a different time (e.g., weeks or months sooner) than other comparable industrial machines with lower utilization rates.

In embodiments, the predictive maintenance knowledge system 33702 may execute algorithms that gather information about a plurality of industrial machines, including a plurality of industrial machines of different types of machine (e.g., stationary machines, mobile machines, machines on vehicles, machines deployed at job sites, and the like) along with service provider information, parts and parts provider information, part location and inventory information, machine production providers, third-party parts handlers, logistics providers, transportation providers, service standards, service requirements, service activities including results of service and the like, and other information to facilitate the predictive maintenance methods and systems described herein. One or more functions of the predictive maintenance knowledge system 33702 may utilize service request information 33726, such as requests for service of a specific industrial machine and/or a collection of industrial machines from industrial machine owners/operators/providers/users to facilitate fulfilling those service requests. In embodiments, such service requests may become inputs to an algorithm that predicts when a service may be recommended for the requester, but also for comparable industrial machines. In an example, an industrial machine owner may request that a subset of industrial machines at a job site receive a first service action. The predictive maintenance knowledge system 33702 may use this request information and other information about the machines, such as their age and utilization rate, to determine when the other industrial machines of the same type as those for which the service is requested should be scheduled for a comparable service action.

In embodiments, in response to the specific service request 33726, the predictive maintenance knowledge system 33702 may access information in the smart RFID 33706 or its cloud-based backup 33708 to determine the specific procedures involved, to determine what experience a potential service provide may need to perform the service. The predictive maintenance knowledge system 33702 may access the knowledge base 33704 to identify candidate service providers. Service providers that are known to the predictive maintenance knowledge system 33702 (e.g., based on, for example information in the knowledge base 33704) as having successfully demonstrated experience with the procedure needed for the requested service may be contacted to provide a service estimate 33736 and/or a price estimate 33734 for service, parts, and the like. Similarly, parts and/or material that may be associated with the procedure of the requested service may be identified. The predictive maintenance knowledge system 33702 may also access the knowledge base 33704 for sourcing information of the parts and/or material. Factors such as part cost, transportation costs, availability, location of the parts versus the machines, prior relationships between one or more parts providers and a party associated with the service request, such as the industrial machine owner and the like, and other factors may be evaluated to determine which parts provider to contact in preparation for ordering the parts. With these factors considered, a part inquiry may be placed with one or more parts providers in anticipation of the service being conducted by the qualified service provider as scheduled. The predictive maintenance knowledge system 33702 may respond to the service request 33726 with one or more service recommendations 33732 that may be associated with one or more price-based service recommendation options 33710 from which the requestor may choose. In embodiments, the predictive maintenance knowledge system 33702 may have enough information from the knowledge base 33704, responses to the service estimate request 33736, and the like to automatically select a specific price-based service recommendation 33710 from the options and may, with or without requestor explicit approval, generate a service order 33718, a parts/material/tools order 33716 if needed for the requested service 33726.

In embodiments, a service request and/or a predicted maintenance activity, and the like may be processed by the predictive maintenance knowledge system 33702 and output a service funding recommendation and/or request 33712. Such a recommendation may include funding the service from operating revenues, taking out a loan for the service, seeking third-party funding (e.g., industry sources, government grants, private funding sources, and the like). Such a request may include providing information to one or more third-parties about the requested service that may be used by the third-parties to submit a funding proposal and/or response. In an example, an industrial machine that provides the public with clean water for a region may require a costly service. The predictive maintenance knowledge system 33702 may determine that the specific industrial machine may be eligible for reimbursement from the federal government for at least a portion of the service. A request for funding by the federal government may be configured and activated through the service funding 33712 and the like.

In embodiments, sources of information that the predictive maintenance knowledge system 33702 may rely on may include information from service providers 33724, information from parts providers 33722, information from service material providers 33720, machine schedules 33730, incoming service estimates and/or quotes 33728, and the like. A predictive maintenance knowledge system 33702 may use service material provider information 33720 to determine price and availability of service material. This information may be combined with service material inventories of the requester (e.g., centralized, depot-based, or on-site of the industrial machine), inventories of material of one or more qualified service providers and the like. In an example, if a service provider has sufficient inventory of the required material accessible local to the industrial machine for which service is required, but will need to replenish that inventory after performing the service, the system may provide a recommendation to the service provider to have the service material provider deliver the service material to the industrial machine site in time for the schedule service. In an example, if the service provider and the industrial machine owner does not have inventory of the required service material, the predictive maintenance knowledge system 33702 may generate an order with one of the service material providers 33720 based on total price, availability, existing relationships with the industrial machine owner and/or the service provider and the like. In embodiments, at least a portion of the inventory of one or more of the service material providers 33720 may be directly managed by the predictive maintenance knowledge system 33702 so that the predictive maintenance knowledge system 33702 may allocate material from the inventory for a service action. The service material provider 33720 may receive a notification from the predictive maintenance knowledge system 33702 that they have been selected to provide the material for the service action. Payment for the material may be made through a transaction facility associated with the predictive maintenance knowledge system 33702 so that an operator of the predictive maintenance knowledge system 33702 and the service material provider 33720 are compensated for their roles in this service action. Comparable examples may be envisioned for parts providers 33722, service provider 33724, service funding sources (not shown), and the like.

In embodiments, the predictive maintenance knowledge system platform 33700 may include a computerized maintenance management system (CMMS) 33714 that may facilitate creating work orders, such as for maintenance actions to resolve equipment problems, and the like. The CMMS 33714 may facilitate communicating parts and service requests to an Enterprise Resource Planning (ERP) system (not shown) that may facilitate handling parts and service orders. In embodiments, an ERP system may be associated with one or more of the owner/operator/provider/lessee/lessor of an industrial machine for which a service action is being coordinated by the predictive maintenance knowledge system 33702. In embodiments, the CMMS 33714 may coordinate with the industrial machine owner's ERP system to effect placement of orders with the service provider, parts provider, and the like.

In embodiments, a predictive maintenance system may include a predictive maintenance knowledge system that facilitates collecting, discovering, capturing, disseminating, managing and processing information about industrial machines to facilitate taking predictive maintenance actions on industrial machines. The knowledge system may include a plurality of interfaces for receiving information from service providers, parts providers, material providers, machine use schedulers, a plurality of interfaces for sending information to service ordering facilities, parts ordering facilities, service management facilities, service funding facilities, and a plurality of interfaces to smart RFID elements on a plurality of industrial machines. The predictive maintenance system may further include a predictive maintenance knowledge graph that facilitates access by the predictive maintenance knowledge system to information about predictive maintenance service of industrial machines through links among data domains including service providers, parts providers, service requests, service estimates, machine schedules, and predictions of maintenance activity. In embodiments, the predictive maintenance knowledge system may generate at least one of service recommendations, price-based service options, price estimates, and service estimates.

In embodiments, preventive maintenance and other scheduled maintenance for industrial machines and the like may be scheduled at set intervals based on manufacturer's expectations regarding failure rates and the like. By gathering and analyzing information about industrial machines and the like, such as operational data, failure data, conditions found during preventive maintenance activities and the like, a new schedule for maintenance activities may be configured that may further reduce the occurrence of unplanned shutdowns due to part failure and the like. Figure 192 depicts a preventive maintenance schedule 33808 for a set of bearings in a group of industrial machines 33802 that use the bearings. As presented, preventive maintenance events A, B, C, and D for the bearings are scheduled to occur at intervals over time for each of the machines. Data collected and analyzed by a predictive maintenance system using the methods and systems for predictive maintenance of industrial machines as described herein may indicate that a different schedule of bearing maintenance is needed to prevent failures. In the example of FIG 192, failures 33804 of machines 4 and 3 occur after preventive maintenance activity B. In response there to, and when taking into consideration other factors, such as operating cycle rate of the industrial machines, a new bearing maintenance schedule may be established for the machines. Since machines 1 and 2 have not yet failed, a predictive maintenance event may be setup for machine 1 33810 and for machine 2 33812. In embodiments, an operational rate of machine 2 may be substantive less than machine 1; therefore, while both machines use the bearings that have failed in machines 3 and 4, a predictive maintenance event schedule may be prepared individually for each machine. The predictive maintenance event for machine 1 33810 may be set to occur earlier than planned (event C) in the preventive maintenance schedule 33808. An additional maintenance event for the machine 2 33812 may be set to occur soon after the upcoming scheduled preventive maintenance event (again event C) based on, for example timing of failure of machines 3 and 4 after preventive maintenance event B. By setting a shorter interval between preventive maintenance event C and predictive maintenance event 2 (33812), a risk of a bearing-related failure may be reduced.

In embodiments, an industrial machine predictive maintenance system may apply machine learning and the like to a range of factors to facilitate predicting and facilitating service, such as determining a schedule for service, identifying at least one qualified party for performing the service, recommending one or more sources of materials required for the service, fulfilling procurement and delivery of the materials required for the service, and rating the service of one or more parts of the industrial machine. The machine learning capability of such a system may take input, such as in the form of diagnostic-related information for the industrial machine from one of a plurality of industrial machine-related diagnostic test data, including without limitation at least one of infrared thermography of one or more parts of the industrial machine, ultrasonic testing of one or more parts of the industrial machine, motor testing of one or more parts of the industrial machine, magnetic field testing of the motor of one or more parts of the industrial machine, electron magnetic flux (EMF) testing of one or more parts of the industrial machine (e.g., pulse detection and the like), current and/or voltage testing of one or more parts of the industrial machine (e.g., from machine resident testing equipment and/or externally applied testing equipment and the like), torsional testing of one or more parts of the industrial machine (e.g., using EMF and the like), nondestructive testing of one or more parts of the industrial machine, (e.g., as may be mandatory for nuclear and power industries and the like), x-ray testing of one or more parts of the industrial machine (e.g., turbine blades and the like), video analysis for detection of vibration of one or more parts of the industrial machine, electronic field testing of one or more parts of the industrial machine, magnetic field testing of one or more parts of the industrial machine, acoustic detection of one or more parts of the industrial machine, power and/or current and/or voltage testing of one or more parts of the industrial machine, (e.g., applying algorithms comparable to those used for vibration analysis to determine when current changes are anomalies), spectrum analysis of power consumed by a machine (e.g., a rotating machine and the like), correlation of mechanical and power faults of one or more parts of the industrial machine, sound meter for validating sound produced by or at least in proximity to one or more parts of the industrial machine, and the like. In embodiments, machine learning may be applied to any of these sources of testing data individually to detect patterns, and the like that may be useful in detecting when a noticeable change in, for example, a detected pattern has occurred or is about to occur.

In embodiments, combinations of diagnostic testing, such as those described herein may be used by machine learning to validate or repudiate one or more potential sources as producing anomalies that may indicate a need for service and the like. In embodiments, combining infrared thermography with motor testing for example, such as by applying a test load onto the motor while capturing infrared images may be useful in determining combinations of conditions may indicate a potential failure, or at least a condition associated with a failure, a need for service, and the like. In embodiments, combining, for example sounds meter capture with non-destructive testing may produce sound patterns that may be compared to baseline sounds for the specific non-destructive test condition; thereby allowing for multi-modal assessment of results (non-destructive testing results and sound test results). In embodiments, variations in sound produced by or proximal to an industrial machine may indicate a potential failure conditions, validate a candidate failure condition, and/or diminish the likelihood of a potential failure. In embodiments, combining multiple modes of non-destructive testing, such as acoustic and x-ray may help determine if a condition that may be detected in one of the testing modes (e.g., acoustic) correlates to a potential anomaly detectible in the other testing mode (e.g., x-ray) and the like. In embodiments, machine learning may develop an array of test conditions, test results, and degrees of compliance with expected results for each of the diagnostic / testing scenarios described herein, and the like. Such an array may facilitate determining when anomalies represent valid potential failure conditions.

In embodiments, each test condition, such as those described above herein may be applied and results may be captured. While a given test condition is being applied, each other test condition may be applied, thereby facilitating collection of combinations of each test condition with each other test condition. Results for each combination may be captured and represented in an array, such as the array described above. Test condition combination testing may be performed when a service call, such as preventive maintenance or repair is required. In embodiments, the industrial machine predictive maintenance system may facilitate coordinating maintenance, such as replacement of worn bearings in an industrial machine. The test condition combination array may be consulted to determine which test conditions might be applied in combination with post bearing replacement testing, such as be detecting one or more cells in the array along post bearing replacement testing axis has little or no combination data. A work order and/or procedure for post bearing replacement testing may be adapted, such as conditionally, and for specific instances, to include applying the additional testing condition indicated by the specific cell in the array. Such as approach may increase testing data, while distributing the burden of testing across time, or at least across instances of performing service on the industrial machine.

In embodiments, machine learning may also be applied to combination condition testing, such as for detecting which combinations of testing conditions correlate best to actual failures. By learning which combinations correlate to failures, combinations that are less likely to yield a potential failure may be deprioritized so that valuable testing resources, such as service personnel and the like can be directed to combination testing with a greater likelihood of yielding actionable information.

In embodiments, test results from a first mode of testing of a specific industrial machine, such as motor testing may be processed with machine learning algorithms and the like that may correlate certain machine testing results with one or more candidate failure modes. Test results from a second mode of testing of the specific machine, such as torsional testing may be processed with the machine learning algorithms and the like that may correlate certain torsional testing results with one or more candidate failure modes. The one or more candidate failure modes from the machine testing may be compared with those of the torsional testing. Any candidate failure modes that match for the two types of testing may be candidates for processing combined test results with machine learning. When the machine testing results and the torsional testing results are combined and processed with machine learning, candidate failure modes may be correlated thereto. If one of the candidate failure modes of the combined testing matches any candidate failure modes of the combined testing, a likelihood of the combined testing indicating a likelihood of failure may be strengthened. When such confirmation is detected through this combined testing result machine learning process, a service/repair action may be initiated to prevent failure of the specific industrial machine. In addition, testing procedures may be adapted to include combination testing so that the likely combined test result failure mode may be avoided in other industrial machines.

Referring to Figure 193, an industrial machine predictive maintenance system 33902 may execute machine learning algorithms 33904 and the like on data from a range of diagnostic testing systems, including without limitation an infrared thermography system 33906, an ultrasonic testing system 33908, a motor testing system 33910, a current and voltage testing system 33912, a torsional testing system 33914, a non-destructive testing system 33916, power, current and/or a voltage testing system 33918, a sound testing system 33920, and the like. The industrial machine predictive maintenance system 33902 may access a library of testing results 33922 that may include test results for these testing systems for prior invocations of tests on a specific industrial machine, and or on similar industrial machines. These results may be processed by the machine learning algorithms with failure mode information for the specific industrial machine and/or similar industrial machines to determine test conditions, and in particular combination of test conditions may correlate to specific failure modes. The machine learning algorithms 33904 may use artificial intelligence techniques to determine patterns, similarities, and the like among data from the library, thereby facilitating detection of combinations of testing conditions that may correlate to one or more failure modes.

In embodiments, a method of improving correlation between diagnostic test results and machine failures may include improving correlation between results of a plurality of diagnostic tests performed on industrial machines and failure information for failures of similar industrial machines by detecting at least one of patterns in the diagnostic test results that correlate to machine failures, similarities of diagnostic test results with machine failures. In embodiments, a single type of machine failure correlates to failure results of a subset of the diagnostic tests.

In embodiments, improved methods and systems for industrial machine maintenance, including methods and systems that facilitate collecting, discovering, capturing, disseminating, managing, and processing information about industrial machines, including factual information (such as about internal structures, parts and components), operational information and procedural information, including know-how and other information relevant to maintenance, service and repairs may include methods for rating a range of services and service providers associated with industrial machine predictive maintenance and the like. In embodiments, service providers for performing maintenance and related activities may be rated. While performing a service prescribed in a service procedure, a service provider (e.g., a technician and the like) may be evaluated for the degree to which (s)he follows the procedure. The degree to which the procedure is followed may be captured implicitly by independently determining if a step has been completed in the order specified. In embodiments, a procedure that requires removing a bearing cover panel followed by taking a photograph of the bearings may be verified by requiring the service technician to submit a photograph of the uncovered bearings before proceeding through the process. In embodiments, the service technician may use a user interface of a computing device, such as a tablet, portable phone, industrial portable computer and the like via which the technician accesses the service procedure. The service technician may be rated along a range of criteria, including without limitation, ease of scheduling, degree of expertise/training with a specific machine and/or service activity, a result of post-service diagnostic testing (e.g., self-testing and the like), estimated versus actual costs for the service, promptness for performing the service as scheduled, cleanliness however subjective that criteria may be, adherence to procedure (e.g., as described above and the like) dependence on other resources, such as third-parties and the like.

In embodiments, a vendor rating system 34000 is depicted in Figure 194. The vendor rating system 34000 may include a vendor rating facility 34002 that captures information about a vendor 34006 (e.g., location(s), user feedback, and the like), service data for one or more procedures 34008 that the vendor 34006 alleges to know, vendor rating weighting data 34010 that may impact how information is used to rate vendors (e.g., older data may be weighted less heavily than newer data, service on machines with very little service information may be weighted less heavily, and the like). The vendor rating system facility 34002 may further consider overall experience level of a vendor by applying an experience scale 34012 that impact a confidence factor of a specific vendor rating based on the vendor's experience and extent of rating. Service technician input 34014 may be considered, such as structured (e.g., multiple choice responses) and/or freeform input that a service technician may provide about a service activity and the like to explain why a procedure was not followed or why a service took longer than anticipated and the like. The vendor rating facility 34002 may further receive information from the diagnostic testing 34022, such as tests performed and results of tests associated with a service action that may be used to evaluate success of the service action performed. The diagnostic testing information 30222 may include information from diagnostics tests such as, infrared thermography, ultrasonic testing, motor testing, current/voltage testing, torsional testing, non-destructive testing, power density testing, sound testing and the like. In embodiments, the vendor rating facility 34002 may rate vendors on a range of vendor rating criteria 34016 including, without limitation results of post service diagnostics as may be determined from the diagnostics test results data 30222 and the like. Vendor rating criteria may further include east of schedule, degree of experience with a procedure, machine, and the like, cost, promptness, cleanliness, adherence to procedures, and the like. Vendor rating results may be stored and accessed in a vendor rating results data store 34022 that may be processed with machine learning algorithms 34024 to improve correlation between, for example, a vendor rating criterion (e.g., degree of experience) and a vendor's ratings.

In embodiments, a method of vendor rating may include determining a rating for an industrial machine service provider by gathering feedback about industrial machine services provided by the service provider and comparing the feedback to a plurality of rating criteria comprising results of diagnostics tests performed after completion of at least one industrial machine service, scheduling the service provider, cost of the service provided, promptness of the service provider, cleanliness of the service provider, adherence to a procedure for the at least one industrial machine service, a measure of experience of the service provider with at least one of the procedure and the industrial machine. In embodiments, the method may include improving correlation of vendor rating results with rating criteria by applying machine learning to vendor rating results and incorporating an output of the machine learning when rating a vendor.

In embodiments, improved methods and systems for industrial machine maintenance, including methods and systems that facilitate collecting, discovering, capturing, disseminating, managing, and processing information about industrial machines, including factual information (such as about internal structures, parts and components), operational information and procedural information, including know-how and other information relevant to maintenance, service and repairs may include methods for rating a range of activities and information associated with industrial machine predictive maintenance and the like. In embodiments, procedural information for performing maintenance and related activities may be rated. While performing a service prescribed in a service procedure, a service provider (e.g., a technician and the like) may indicate a rating for each procedure, such as for each substantive service procedure action, through a user interface via which the technician accesses the service procedure. The service technician may rate each procedure along a range of criteria, including without limitation, ease of access to the information, educational value of the information, accuracy of the descriptions, accuracy of the images, accuracy of the sequence, degree of difficulty to perform the service, and the like. Service providers and the like who rely on procedural information for performing maintenance and the like on one or more machines may develop know how regarding servicing systems using such procedural information. This know how may be captured in a procedure rating system through free form comments associated with the procedure, via suggested edits to the published procedures, and the like.

In embodiments, a procedure to perform a maintenance task may be clear to a service technician who is familiar with the particular machine, yet it may not be sufficiently clear to service personnel with less experience. Therefore, information about the service technician completing the procedure rating task may be applied to better weight the ratings. Additionally, a service procedure may be rated on an experience scale that may facilitate identifying when a less experienced person could be used to perform a service task and when an experienced provider is preferred. Such information may be useful to an industrial machine predictive maintenance system for facilitating selection of a service entity suitable for performing a required service task and the like. In embodiments, an industrial machine predictive maintenance system may gather information that may be descriptive of various aspects of a service / maintenance procedure, such as the experience scale rating when facilitating access to vetted service personnel. In particular, if a service procedure is rated as highly complex to follow, then service entities that have few or no experienced personnel available for performing the service may by bypassed or at least may be presented below service entities that have greater experience, greater numbers of available experienced service technicians and the like. Rating procedural information may further enhance systems for generating service procedural information by identifying characteristics of service procedure that are preferred over those that are found to be lacking and the like.

In embodiments, such as shown in FIG 195, methods and systems for rating industrial machine service and/or repair procedures may include a procedure rating facility 34102 that may aggregate various sources of procedure rating content and produce one or more ratings for the procedure, such as ease of use, accuracy, flexibility and the like. Such a rating facility 34102 may have access to the procedure 34106, such as to process the text, images, flow charts and the like in the procedure; thereby facilitating rating various elements that contribute to the procedure. The procedure rating facility 34102 may also have access to service data 34108 for the procedure, such as a long of instance of use of the procedure, and the like. Such service data may be useful in determining a degree of confidence of a rating of the procedure. Rating for procedures that are used less often may have lower confidence than ratings for often used procedures, due at least in part to the lack of comparative data for the lower-use procedures. Rating procedures may also include accessing weighting 34110 of factors that contribute to the rating, such weighting may be explicitly stated, implicitly determined, and may vary based on factors such as age of the procedure, availability of materials required to follow the procedure, and the like. In embodiments, rating some procedures may be impacted by experience of contributors to the rating process, such as service technicians, supervisors, procedure quality testers, and the like. Therefore, an experience scale 34112 may be applied to the rating algorithm to, for example, impact the aspects of a procedure that a contributor with given experience may be permitted to evaluate, and the like. In embodiments, service technician and other contributor inputs 34114 to the rating process may be gathered explicitly, such as through a contributor marking a rating scale for various aspects of the procedure (e.g., the text of the procedure, the translation of a procedure, and the like). Contributor input may be gathered implicitly, such as by tracking the time that it takes to perform the steps in the procedure, and the like. In embodiments, if a service technician followed different steps or additional steps than those presented in the procedure, the procedure rating facility may take this input and reasons for these other steps as influence of the rating of the procedure. This feedback may help identify procedures with inaccurate machine analysis and or manufacturers guidance that may help in improving service quality. Improper machine fault diagnosis may be analyzed by artificial intelligence, such as the machine learning facility 34124 to improve analysis. Feedback from technicians and procedure rating analysis and results may be made available or pushed to the procedure developer (e.g., the industrial machine manufacturer and the like) to facilitate improving the procedure to achieve better and faster repairs. Through incentivized feedback programs and proper use thereof, such as for the rating procedures 34102, institutional knowledge may permeate every aspect of a preventive maintenance system without requiring one-on-one training like in the past.

In embodiments, a procedure rating facility, such as the rating facility 34102 may further have access to rating criteria 34116, which may include without limitation, ease of accessing the procedure, ease of translating the procedure, educational value of the procedure, accuracy of the text, accuracy of the images/graphics, accuracy of related content (e.g., parts lists), validity of the sequence of steps, degree of difficulty overall to obtain an error free result from the procedure when using it for the first time, dependence on other steps that may or may not be directly documented, and the like. A rating facility, such as the procedure rating facility 34102 may produce procedure rating results 34122 that may be stored electronically, such as in a non-volatile computer-accessible memory and the like. In embodiments, ratings for procedures for a specific industrial machine may be stored in one or more of the smart RFID components disposed with the machine. The procedure rating results 34122 may be improved through use of the machine learning 34124 that works cooperatively with the procedure rating facility 34102, and the like.

In embodiments, a method for rating an industrial maintenance procedure may include determining a rating for an industrial machine service procedure by gathering feedback about the procedure from service providers who use the procedure to perform an industrial machine service and comparing the feedback to a plurality of rating criteria comprising ease of access of the procedure, ease of translation, educational value, accuracy of content, sequence accuracy, ease of following the procedure, and dependence on non-procedure actions. The method may further include improving correlation of procedure rating results with rating criteria by applying machine learning to procedure rating results and incorporating an output of the machine learning when rating a procedure.

In embodiments, Blockchain™ techniques and applications, such as decentralized voting, cryptographic hashing, verifiability, security, open access, speed of access and update, as well as ease of adding participants (e.g., contributors, verifiers and the like) may be applied to the industrial machine predictive maintenance methods and systems described herein. Collection of data, such as operational, test, failure, and the like from industrial machines may be processed in a Blockchain™ approach that facilitates ensuring verifiability of information regarding system status, failures, and the like. Transactions for parts orders, service orders, and the like may be processed in a Blockchain™ thereby increasing security and verifiability of transactions, including information such as costs, and the like that may be utilized by the predictive maintenance systems described herein to manage industrial machine maintenance and service activities. Other uses of block chain may include securing a distributed public ledger, such as the distributed ledger 33302 depicted in and described in association with Figure 187 herein.

In embodiments, transactions conducted over a peer-to-peer network of industrial machines, such as IoT devices and the like may be operated as a Blockchain™ enabled distributed ledger, thereby reducing a dependency on a centralized control or repository of industrial machine and the like preventive maintenance data. In an example of Blockchain™ functionality in an industrial machine predictive maintenance system, changes to smart RFID elements on individual machines and their counterpart network-resident copy may be processed through a Blockchain™ distributed ledger system that facilitates open access to information in the RFID, such as by accessing the relevant information in the network-resident copy.

In embodiments, FIG 196 depicts a Blockchain™ for transactions associated with a specific industrial machine 34200 that may be initiated 34202 when the industrial machine is shipped or finalized for shipment. As further transactions of the specific industrial machine are performed, such as during an installation 34204, collecting operational information from sensors deployed with the industrial machine 34206, service events of the machine 34208, parts and service orders 34210, diagnostic activity 34212, and the like each may be added to the Blockchain™ for the specific industrial machine; thereby providing a secure, verifiable, traceable data set for the industrial machine that can be leveraged by the predictive maintenance methods and systems described herein.

In embodiments, a method of accumulating information about an industrial machine may include initiating a blockchain of industrial machine information for a specific industrial machine by generating an initiating block, and generating subsequent blocks of the specific industrial machine blockchain by combining data from at least one of shipment readiness, installation, operational sensor data, service events, parts orders, service orders, and diagnostic activity and a hash of the most recently generated block in the blockchain.

In embodiments, predictive maintenance schedules, actions, and the like may be based on analysis of industrial machine operational data, such as data from sensors deployed with the industrial machine. Determining a maintenance triggering threshold for operational data, including sensed data, may include identifying a type of effect the data represents and then determining data values that represent acceptable operation, questionable operation, unacceptable operation, and other types of operation. In embodiments, vibration sensors deployed to detect and monitor vibration activity of industrial machine components, structural elements, and the like may facilitate determining how vibration of machine parts contributes to predictive maintenance actions. Determining a severity of vibration data from the sensors relative to timing and the like of predictive maintenance actions may require more than conventional vibration analysis. In embodiments, vibration measures may be translated into severity units that may be used when predicting maintenance requirements and the like.

In embodiments, while vibration may be useful for determining negative effects on industrial machines, vibration analysis is generally complex and varies greatly based on frequency of vibration, vibration source, material being vibrated, machine operating cycles per minute, and the like. A measure of vibration, such as vibration velocity may be useful for determining when vibration is a problem for a mid-range vibration frequency, but alone it fails to usefully provide insight at low and high frequencies. Therefore, vibration analysis that is frequency independent, such as vibration analysis measures that are normalized, may result in useful predictive maintenance information.

In embodiments, normalizing vibration analysis results into severity units as described herein may facilitate vibration frequency independence. Overall vibration spectra, RMS levels, and the like may be expressed in units of displacement, velocity, acceleration and the like. In an example, bearing cap vibration readings may be expressed as vibration velocity at least because it directly relates to mechanical severity of the vibration. As noted above, while vibration velocity may be sufficient for mid-range frequency components, low and high frequency components exhibit significant exceptions to the relevance of vibration velocity for predictive maintenance algorithms. It will be appreciated in light of the application that vibration velocity man be characterized through amplitude-versus-frequency charting and the like that, in effect, linearly lower the velocity severity requirements (e.g., vibration amplitude and the like) for low and high frequencies, such as when compared to mid-range frequency velocity severity requirements.

In embodiments, the methods and systems described herein extend and enhance methodologies of frequency charting to facilitate normalizing vibration spectra so that it can be expressed as vibration severity units that are consistent across wide vibration frequency spectra, such as from near-zero frequency to well over 18,000 cycles per minute (cpm). Components of the vibration spectra that occur at frequencies below a low-end linearity frequency (e.g., a low-end knee frequency value) will be processed with an algorithm that normalizes to a value of displacement (e.g., a preset value of millimeters of displacement) because displacement (e.g., amplitude) has been shown to be a more significant indicator of severity than velocity at lower frequencies. Components of vibration spectra that occur at frequencies above a high-end linearity frequency (e.g., a high-end knee frequency value) will be processed with an algorithm that normalizes to a value of units of gravity (e.g., a preset value of g's or g force). The net result is that each range of the frequency spectra (below the low-end knee threshold, mid-range, and above the high-end knee threshold) can be mapped uniformly to severity units. In many examples, the frequency spectra may be broken into three ranges (below low-end knee threshold, mid-range, and above high-end knee threshold), fewer or more ranges of frequency spectra may be determined and applied without exceeding the scope of the vibration data normalization techniques for generating predictive maintenance vibration severity units.

In embodiments, methods and systems include normalizing vibration amplitude units into units that are independent of frequency. These units can be referred to as severity units or action units. In many examples, vibration spectra, overall levels or root-mean-square levels are expressed in units of displacement, velocity or acceleration. For bearing cap readings, for example, vibration velocity is most commonly used as it may be directly related to mechanical severity. Although sufficient for mid-frequency components, there can be, however, significant exceptions for low frequency and high frequency domains. It will be appreciated in light of the disclosure that many amplitude-versus-frequency severity charts have been constructed to linearly lower the velocity severity requirement for both the lower and the higher frequency components depicted in the chart.

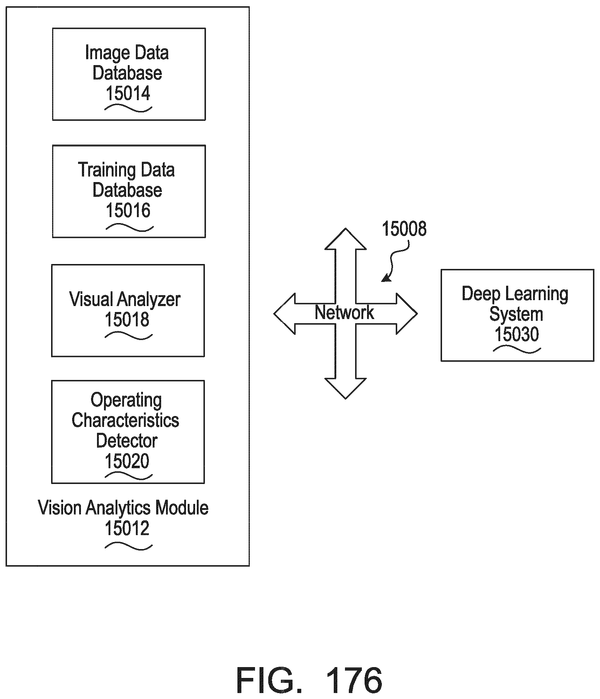

In embodiments, the methods and systems include development and construction of a severity graph to normalize vibration spectra as severity units. By way of this example, lower frequency components below a predetermined knee level of about 1,200 cycles per minute, as depicted in Figure 176, will be gained by a predetermined factor (as a function of the slope) such that its amplitude in severity units may be normalized with respect to severity. Similarly, for higher frequency components above a knee level of about 18,000 cycles per minutes, spectral peaks are also gained by a different predetermined factor to achieve severity flatness. In embodiments, spectra displayed in severity units may be displayed with horizontal lines to demarcate severity. In many aspects of the embodiments, other spectral components related to one or more bearing defect frequencies and/or one or more bearing resonance frequencies may have their corresponding amplitudes adjusted for severity. By way of this example, other spectral components related to one or more bearing defect frequencies may have their corresponding amplitudes increased to adjust for severity, other spectral components related to one or more bearing resonance frequencies may have their corresponding amplitudes decreased to adjust for severity. In addition, other digital processing techniques, which output spectra such as enveloping, may be employed to supplement or superimpose spectral peaks within the severity spectrum. In embodiments, the final resulting severity spectrum may then be displayed local, remotely and/or accessed through a cloud network facility for presentation and analytical purposes. In embodiments, the final resulting severity spectrum may be fed to an expert system for analysis and evaluation of the severity. In many aspects of the embodiments, an overall level may be calculated or derived from this "normalized" spectrum to produce an overall level or a root-mean-square level in units of severity rather than the more typically collection of disparate units currently utilized by vibration monitoring systems.

In embodiments, Figure 197 depicts a diagram showing a severity unit conversion function for normalizing vibration sensor data for casing vibration on industrial machinery. The severity unit conversion function 30602 includes vibration displacement rate (inches per second) along a vertical axis 30604 and vibration frequency cpm (cycles per minute) along a horizontal axis 30606. A low-end frequency demarcation 30608 is set at 1200 cpm, defining the upper end of the low-end vibration frequency region 30610 as well as the lower end of the mid-frequency region 30612. A high-end frequency demarcation 30614 is set at 18000 cpm, defining a lower end of the high-end vibration frequency region 30616 as well as the high-end of the mid-frequency region 30612.

Severity for the embodiment of Figure 176 is calculated as follows:

$$S = M \times A \qquad (30601)$$

In the equation 30601, S is the severity value being calculated, A is a mid-range severity limit, and M is a severity normalizing value that is calculated for each of the three vibration spectra ranges as follows:

for the low-end range 30610: M= vibration frequency/low-end demarcation value;
for the mid-range 30612: M=1; and
for the high-end range 30616: M=high-end demarcation value/vibration frequency.

In the example of the embodiments of Figure 197, the low-end range M=frequency/1200 and for the high-end range M=18000/frequency. This results in an acceptable severity value of approximately 2.5 mils for the low-end range and 2.5 g's for the high-end range.

In embodiments, the severity normalization function exemplified in Figure 197 can facilitate developing severity units for each frequency range that may be used by the predictive maintenance methods and systems described herein.

In embodiments, five severity units are identified and may be applied to each frequency range. Severity units may be named: acceptable, watch, resurvey, action soon, immediate, and the like. In embodiments, vibration data that results in an acceptable severity unit has little, if any, impact on predictive maintenance analysis and action recommendations. Vibration sensor data studies that result in acceptable severity unit analysis may be gathered and further analyzed for variations among industrial machines, such as similar industrial machines, similar portions of industrial machines, different generations of industrial machine or portion thereof and the like.

In embodiments, additional severity categories may be added as depicted in Figure 198. With continuing reference to Figure 198, the exemplary severity chart may define severity levels with associated actions for those levels. By way of this example, the severity chart may be associated with spectral peaks taken with a bearing cap mounted accelerometer. The range at which the one or more detected signals are deemed acceptable and, therefore, the least severe across the three ranges of the detected signal are less than about 2.5 thousandths of an inch peak-to-peak (about 63.5 micrometers peak-to-peak) when measuring displacement for a regime that is less than about 1,200 cycles per minute or less than about 20 Hz. For the regime that is about 1,200 cycles per minute to about 18,000 cycles per minute or about 20 Hz to about 300 Hz, the severity chart may assess signals in terms of velocity and the acceptable and, therefore, least severe level is less than about 0.15 inches per second at peak (about 3.81 millimeters per second at peak). For the regime that is greater than about 18,500 cycles per minute or greater than about 300 Hz, the severity chart may assess signals in terms of acceleration and the acceptable and, therefore, least severe level is less than about 2.5 g level at peak.

The range at which the one or more detected signals are deemed worthy of watching and, therefore, one level higher than the least severe across the three ranges of the detected signal are between 2.5 thousandths of an inch peak-to-peak (about 63.5 micrometers peak-to-peak) and 5 thousandths of an inch peak-to-peak (about 127 micrometers peak-to-peak) when measuring displacement for a regime that is less than about 1,200 cycles per minute or less than about 20 Hz. For the regime that is about 1,200 cycles per minute to about 18,000 cycles per minute or about 20 Hz to about 300 Hz, the severity chart may assess signals in terms of velocity and the worth to watch and, therefore, one level higher than the least severe level is between about 0.15 inches per second at peak (about 33.8 millimeters per second at peak) and about 0.3 inches per second at peak (about 67.6 millimeters per second at peak). For the regime that is greater than about 18,500 cycles per minute or greater than about 300 Hz, the severity chart may assess signals in terms of acceleration and the worthy to watch and, therefore, one level up from the least severe level is between about a 2.5 g level at peak and about a 5 g level at peak.

The range at which the one or more detected signals are determined to be sufficient to suggest or require a re-survey of the machine or route from which the one or more signals were obtained and, therefore, one level higher in severity than the watch level and two levels of severity higher than the least severe across the three ranges of the detected signal are between 2.5 thousandths of an inch peak-to-peak (about 63.5 micrometers peak-to-peak) and 5 thousandths of an inch peak-to-peak (about 127 micrometers peak-to-peak) when measuring displacement for a regime that is less than about 1,200 cycles per minute or less than about 20 Hz. For the regime that is about 1,200 cycles per minute to about 18,000 cycles per minute or about 20 Hz to about 300 Hz, the severity chart may assess signals in terms of velocity and define a range in which it may be sufficient to suggest or require a re-survey of the machine or route from which the one or more signals were obtained between about 0.3 inches per second at peak (about 7.62 millimeters per second at peak) and about 0.6 inches per second at peak (about 15.24 millimeters per second at peak). For the regime that is greater than about 18,500 cycles per minute or greater than about 300 Hz, the severity chart may assess signals in terms of acceleration and be sufficient to suggest or require a re-survey of the machine or route from which the one or more signals were obtained between about a 5 g level at peak and about a 10 g level at peak.

By way of this example, the range at which the one or more detected signals are determined to be sufficient to flag for action soon and, therefore, one level below a severity level to flag for action. In other examples, there can be a flag for action now and a flag action including a flag for shutdown when the severity of one or more detected signals warrant such a flag. When measuring displacement for a regime that is less than about 1,200 cycles per minute or less than about 20 Hz, the sufficient to flag for action soon range may be between about 10 thousandths of an inch peak-to-peak (about 254 micrometers peak-to-peak) and about 16.6 thousandths of an inch peak-to-peak (about 421.64 micrometers peak-to-peak). For the regime that is about 1,200 cycles per minute to about 18,000 cycles per minute or about 20 Hz to about 300 Hz, the severity chart may assess signals in terms of velocity and define a range in which it may be sufficient to suggest or require a re-survey of the machine or route from which the one or more signals were obtained between about 0.6 inch per second at peak (about 15.24 millimeters per second at peak) and about 1 inch per second at peak (about 25.4 millimeters per second at peak). For the regime that is greater than about 18,500 cycles per minute or greater than about 300 Hz, the severity chart may assess signals in terms of acceleration and be sufficient to suggest or require a re-survey of the machine or route from which the one or more signals were obtained between about a 10 g level at peak and about a 16.6 g level at peak.

By way of this example, the range at which the one or more detected signals are determined to be sufficient to flag for immediate action and, therefore, at the highest severity level. In other examples, there can be a flag for immediate action and a flag action including a flag for shutdown when the severity of one or more detected signals warrant such a flag. When measuring displacement for a regime that is less than about 1,200 cycles per minute or less than about 20 Hz, the sufficient to flag for immediate action soon range may be above about 16.6 thousandths of an inch peak-to-peak (about 421.64 micrometers peak-to-peak). For the regime that is about 1,200 cycles per minute to about 18,000 cycles per minute or about 20 Hz to about 300 Hz, the severity chart may assess signals in terms of velocity and define a range in which it may be sufficient to flag for immediate action above about 1 inch per second at peak (about 25.4 millimeters per second at peak). For the regime that is greater than about 18,500 cycles per minute or greater than about 300 Hz, the severity chart may assess signals in terms of acceleration and be sufficient to flag for immediate action soon above about a 16.6 g level at peak.

It will be appreciated in light of the disclosure that the severity chart in Figure 197 depicts 0.15 inch per second velocity at 1,250 cycles per second in the Acceptable category. The conversion between displacement, velocity and acceleration depicted in Figure 197 shows that 2.5 thousandths of an inch displacement peak-to-peak is equivalent to 0.15 inches per second velocity at 1,250 cycles per second in the normalization to determine severity units. Figure 197 also shows that 0.2 inches per second velocity at peak at 61,450 cycles per minute is equivalent 2.5 g level of acceleration. The Watch category spans 6 dB. The Resurvey category spans 6 dB and the Action Soon category spans about 4.5 dB.

It will be appreciated in light of the disclosure that many examples of severity charts may be based on highly specific equipment types. In many examples, some of these classifications may be simplified because many categories of machines that run at sufficiently low or relatively slower speeds may not need separate severity categories. In these examples, severity units based on velocity may be sufficient to provide one or diagnoses. In many examples, communication between different subsystems such as a raw data server that may serve up vibration waveform, spectrum and overall levels and an expert system engine that must translate this raw data into meaningful severity units may be significantly simplified by the use of normalizations to produce the severity units.

In embodiments, the severity units may be applied to non-vibration data where signal processing techniques may be applied to any raw set of data that has specialized significance, but which must be normalized to be successfully compared or analyzed. In embodiments, actuarial data regarding the viability of a specific pharmaceutical treatment that may be gender specific may be normalized to the general population. It will be appreciated in light of the disclosure that one or more established techniques or guidelines normalizing the gender-specific data to a gender-less universe becomes useful for subsystem communication to AI, statistical, tutorial or other relevant systems.

In embodiments, vibration data that results in a watch severity unit may impact aspects of predictive maintenance recommendations, such as a frequency of occurrences of vibration data collection and analysis.

Watch severity unit determination may result in conducting at least vibration data collection and analysis more frequently. It may also result in checking other conditions of the components being vibrated, such as by performing calibration, diagnostic testing, visual inspection and the like.

In embodiments, vibration data that results in a resurvey severity unit may trigger performing vibration data collection and analysis as soon as possible. Resurvey severity unit determination may result in a signal (e.g., a set of commands and the like) being transmitted to relevant portions of the affected industrial machine to configure the data collection and routing functionality and elements to repeat the vibration data collection and analysis again. It may also result in configuring the industrial machine data collection control systems to initiate data collection from other sensors for the involved industrial machine elements. Likewise, it could raise the priority of collecting comparable vibration sensor data from other similar industrial machines so that it can be available for comparative analysis of the resurveyed vibration study and the like.

In embodiments, vibration data that results in an action soon severity unit may trigger scheduling a service action of the affected parts well ahead of a next scheduled maintenance for a portion of the industrial machine with the affected parts. It may also result in escalating actions (e.g., preventive, survey, analysis, and the like) for related elements. In an example, if vibration data for a motor indicates taking action soon, vibration data collection, preventive maintenance actions, calibration actions and the like may be activated for a drive shaft of the motor, a gearbox being driven by the driveshaft, and the like.

In embodiments, vibration data that results in an immediate severity unit may be treated as constructive approval to perform all necessary part replacement as soon as possible, thereby triggering ordering of replacement parts, materials, and the like to perform one or more service actions on the industrial machine. Such a result may also trigger certain automatic actions such as stopping use of the industrial machine, reducing the duty cycle of the industrial machine, reducing an operating cycle rate of the industrial machine, and the like until service is performed, and the like.

An embodiment of severity units applied to vibration across a wide vibration frequency range is representatively depicted in Figure 198. In the representative embodiment of Figure 198, each of five severity units are mapped to the three vibration spectra regions represented in Figure 197, specifically for vibration frequencies below 1200 cpm, between 1200 cpm and 18000 cpm, and above 18000 cpm.

In embodiments, within each spectral region severity units are defined. For the spectral region below the low-end threshold (e.g., 1200 cpm), vibration displacement below 2.5 mils peak-to-peak meets the acceptable severity unit criteria; between 2.5 and 50 indicates a watch severity unit; between 5.0 and 10.0 indicates a resurvey severity unity; between 10.0 and 16.6 mils displacement indicates an action soon severity unit, and displacement greater than 16.6 mils triggers an immediate action severity unit. For vibration frequency spectra between 1200 cpm and 18000 cpm, normal severity is characterized by displacement below .15 inches per second peak (ipsp); watch is between 0.15 and 0.3 ipsp; resurvey is between .3 and .6 ipsp; action soon severity occurs between 0.6 and 1.0 ipsp; and immediate action severity occurs for vibration displacement rates greater than 1.0 ipsp. For vibration frequency spectra greater than 18000 cpm, acceptable severity is indicated by vibration analysis indicating less than 2.5 gs peak; watch is indicated by 2.5 gs to 5.0 gs; resurvey for 5.0 gs to 10.0 gs; action soon for 10.0 gs to 16.6 gs; and immediate action severity unit is indicated for vibration that results in forces greater than 16.6 gs.

Applications of the severity unit methods and systems described herein include uses across a range of machines operating at various speeds. Unlike existing vibration analytical tools, the algorithm-based approach described herein can readily handle slower speed machines by effectively removing some unnecessary computational complexity associated with an impact of machine speed, and the like. In environments where different machines perform different actions, such as raw data analysis and severity detection, communication bandwidth must be increased to support providing enough information to ensure robust severity determination. Use of the severity unit methods and systems described herein significantly simplify data communication needs in such embodiments; thereby reducing communication bandwidth demand in corresponding environments and the like.

While this discussion of severity units is directed at vibration data analysis and the like, the methods and systems for severity unit determination and detection may be applied to data sources other than vibration that can benefit from normalization for successful comparison. In embodiments, actuarial data regarding the viability of a specific pharmaceutical treatment for one or both genders may be normalized using the methods and systems described herein to be applied to the general population. Algorithms may be generated that accommodate existing guidelines for severity, yet extend them using the methods and systems described herein to produce gender-less (gender normalized) severity measures.

In embodiments, a method of predicting a service event from vibration data may include a set of operational steps including capturing vibration data from at least one vibration sensor disposed to capture vibration of a portion of an industrial machine. The captured vibration data may be processed to determine at least one of a frequency, amplitude, and gravitational force of the captured vibration. Next, a segment of a multi-segment vibration frequency spectra that bounds the captured vibration may be determined, based on for example the determined frequency. Thus, calculating a vibration severity unit for the captured vibration may be based on the determined segment and at least one of the peak amplitude and the gravitational force derived from the vibration data. Additionally, the method may include generating a signal in a predictive maintenance circuit for executing a maintenance action on the portion of the industrial machine based on the severity unit.

In embodiments, the segment is determined based on comparing the determined frequency to an upper limit and a lower limit of a mid-segment of the multi-segment vibration frequency spectra. A first segment of the multi-segment vibration frequency spectra may include determined frequency values below a lower limit of a mid-segment of the multi-segment vibration frequency spectra. The lower limit of the mid-segment of the multi-segment vibration frequency spectra may be 1,200 kHz and the upper limit may be 18,000 kHz. In embodiments, a second segment of the multi-segment vibration frequency spectra may include determined frequency values above an upper limit of a mid-segment of the multi-segment vibration frequency spectra.

In embodiments, calculating a vibration severity unit may include producing a severity value by multiplying one of a plurality of severity normalizing parameters by a mid-range severity limit and mapping the vibration severity value to one of a plurality of severity unit ranges of the determined segment. A first severity normalizing value of the plurality of normalizing values is calculated by dividing the determined frequency by a low-end frequency value of the mid-segment of the multi-segment vibration frequency spectra. A specific one of the plurality of severity normalizing parameters includes the first severity normalizing value when the determined frequency value is less than the low-end frequency value.

In embodiments, a second severity normalizing value of the plurality of normalizing values is calculated by dividing a high-end frequency value of the mid-segment of the multi-segment vibration frequency spectra by the determined frequency. A specific one of the plurality of severity normalizing parameters includes the second severity normalizing value when the determined frequency values is greater than the high-end frequency value.

Regarding segments of the multi-segment vibration frequency spectra, a first segment of the multi-segment vibration frequency spectra is divided into a plurality of severity units based on the determined amplitude of vibration. A second segment of the multi-segment vibration frequency spectra is divided into a plurality of severity units based on the determined gravitational force.

In embodiments, the vibration severity unit is determined based on a peak displacement of the determined amplitude of vibration for determined vibration frequencies within the first segment of the multi-segment vibration frequency spectra. In an example, the vibration severity unit is determined based on the determined vibration-induced gravitational force for determined vibration frequencies within the second segment of the multi-segment vibration frequency spectra.

In embodiments, the portion of the industrial machine may be a moving part, a structural member supporting a moving part, a motor, a drive shaft, and the like.

In embodiments, a system for predicting a service event from vibration data may include an industrial machine that includes at least one vibration sensor disposed to capture vibration of a portion of the industrial machine. The system may further include a vibration analysis circuit in communication with the at least one vibration sensor and that generates at least one of a frequency, peak amplitude, and gravitational force of the captured vibration. The system may yet further include a multi-segment vibration frequency spectra structure that facilitates mapping the captured vibration to one vibration frequency segment of the multiple segments of vibration frequency. Also, the system may include a severity unit algorithm that receives the determined frequency of the vibration and the corresponding mapped segment and produces a severity value which is then mapped to one of a plurality of severity units defined for the corresponding mapped segment. In embodiments, the system may also include a signal generating circuit that receives the one of the plurality of severity units, and based thereon, signals a predictive maintenance server to execute a corresponding maintenance action on the portion of the industrial machine.

In embodiments, the system may calculate the vibration severity level via vibration severity calculation software. The vibration severity calculation software may be configured to digitally substantially perform the functions of one or more of the vibration analysis circuit, the multi-segment vibration frequency spectra structure, and the severity unit algorithm and may be configured to be run by any general-purpose processor or otherwise suitable machine. The vibration severity calculation software may be configured to receive an input of a signal from the vibration sensor. The signal may be a digital signal or an analog signal and may include a vibration waveform, i.e. a captured vibration.

In embodiments, the vibration severity calculation software may digitally implement one or more of high-pass filtering, low-pass filtering, integration, and differentiation of the signal received from the vibration sensor to calculate the vibration severity level. The vibration severity calculation software may generate at least one of a frequency, peak amplitude, and gravitational force of the captured vibration from the vibration sensor. The vibration severity calculation software may map the captured vibration to one vibration frequency segment of the multiple segments of vibration frequency. The vibration severity calculation software may produce the severity value based on the determined frequency of the vibration and map the severity value to one of a plurality of severity units defined for the corresponding mapped segment.

In embodiments, the severity unit may be outputted by the vibration severity calculation software to a user or an analyst, and/or to one or more of the expert systems so that action may be taken based thereon. In some embodiments, the vibration severity calculation software may receive the one of the plurality of severity units and signal a predictive maintenance server to execute a corresponding maintenance action on the portion of the industrial machine from which the captured vibration was captured, the corresponding maintenance action being based on the one of the plurality of severity units. The vibration severity calculation software may be implemented to calculate the vibration severity level in place of or in addition to one or more of the vibration analysis circuit, the multi-segment vibration frequency spectra structure, and the severity unit algorithm.

In embodiments, vibration-related data collected from sensors disposed with an industrial machine may include displacement, velocity, acceleration, and the like. Additionally, data such as velocity, acceleration and the like may be calculated from raw collected data, such as displacement gathered over known units of time and the like. Velocity may be based on a count of detectable vibration events in a specific period. Velocity may be independent of a size or length of a displacement occurrence. In embodiments, acceleration may be calculated as a rate of change of velocity measures. In embodiments, acceleration may be generated from one or more acceleration sensors that may detect a time of a start of displacement and relative time of an end of displacement in a specific direction and based thereon may identify an acceleration of the part during a vibration occurrence. Vibration data may be helpful in determining if a part may be subject to excessive vibration. Analyzing such vibration data to make the determination involves factoring in aspects of vibration, such as frequency and the like. As described herein, conventional approaches to vibration analysis for determining a degree to which detected vibration may be unacceptable, requires evaluating vibration in different portions of the vibration spectra differently. A novel approach to normalize evaluation of an impact of vibration across an extended range of vibration spectra, such as a threshold of vibration beyond which the vibration is likely to cause a problem, such as a breakdown of the vibrating component may benefit predictive maintenance systems, such as expert systems and the like that may attempt to provide actionable information to machine owner and the like.

In embodiments, Severity Units may facilitate normalizing vibration analysis for the purposes of determining if detected vibration is unacceptable by eliminating, or at least obfuscating the need for calculating multiple vibration measures across a range of vibration spectra. By normalizing different units of vibration measure over spectral ranges, Severity Units, also referred to herein as Action Units, may facilitate application of Severity Units for a wide range of vibration analysis applications, including without limitation, industrial machine vibration analysis, moving part vibration analysis, complex mechanical system vibration and the like.

In embodiments, the system may normalize one or more severity units using included (or accessed) severity normalization methodologies. In some embodiments, the severity normalization methodologies may execute an envelope analysis method. In embodiments, the severity normalization methodologies may scan a stream of vibration severity units with a band-pass filter, e.g., a band-pass filter having a width of 500 Hz, over a plurality of bands having little to no overlap, e.g., 1 kHz to 40 kHz. The severity normalization methodologies may include processing each of the scanned bands, e.g., via harmonic filtering, to analyze running speeds and electrical signals thereof to determine an envelope. With this, overall AC and DC values of the envelope can be computed and optimum regions for location of a band-pass filter based on the AC and DC values can be determined. In these examples, AC values may be used by the severity normalization methodologies to detect modulation of bearing defect frequencies. In further examples, DC values may be used to determine issues such as insufficient lubrication. By way of these examples, the determined band-pass filter location may be referred to as an envelope spectrum. In embodiments, the severity normalization methodologies may superimpose envelope spectrums from different severity units at differing frequencies. In these examples, the severity normalization methodologies may be configured to be run by any general-purpose processor or otherwise suitable machine.

In embodiments, the severity normalization methodologies may include the application of waveform analysis processes, such as overall, true peak, peak-to-peak, crest-factor, K-factor, product of crest-factor and amplitude. In embodiments, the severity normalization methodologies may further include the application of statistical stability measurement techniques to the vibration waveforms within the envelope spectrum. In these examples, the waveforms may be labeled according to results of the waveform analysis processes. In embodiments, the severity normalization methodologies may implement phase stability spectrum analysis by marking trends in phase variation of vibration waveforms over time in a stream of severity units. In embodiments, the severity normalization methodologies may also implement phase stability spectrum analysis by marking trends in phase variation over time of the vibration waveforms directly. In doing so, the severity normalization methodologies may include the qualification of stability of the phase variation. In embodiments, the severity normalization methodologies may implement amplitude stability spectrum analysis (in contrast to phase stability spectrum analysis) by marking trends in amplitude variation of vibration waveforms over time in a stream of severity units and/or a vibration waveform directly. In embodiments, the amplitude stability spectrum analysis may include the qualifying of the stability of the phase variation. In embodiments, the severity normalization methodologies may include production of histograms of phase, amplitude, and other characteristics of vibration waveforms for analysis by users, analysts, and/or expert systems.

In embodiments, Figure 199 depicts a vibration severity graph that charts vibration frequency along the horizontal axis. The graph includes two vertical axes - one that represents traditional vibration measures that are frequency dependent; the other represents Severity Units that are independent of frequency. The traditional vibration measures a line 30802 shows three segments, indicating safe vibration limits for three ranges of frequency. A severity units line 30804 shows a single horizontal line indicating a safe vibration-severity limit for all ranges of frequency. For traditional vibration analysis derivatives of vibration are adjusted for frequency. Such derivatives below the line 30802 may represent acceptable levels of vibration. Similarly, vibration derivatives above the 30802 may represent unacceptable levels of vibration. However, the function required to determine whether a sample of vibration results in a derivative above or below the line 30802 is different for different vibration frequencies. The knee values 30806 and 30808 may typically, as described herein align with vibration frequencies of 1,200 CPM and 18,000 CPM; however, material type, vibration object type and other factors may further impact the function to perform. In contrast, the methods and systems described herein for generating and using Severity Units and/or Action Units may be adapted to generate a normalized limit for vibration severity a represented by the line 30804. Severity/Action unit-based calculated measures of vibration below the line 30804 may indicate safe vibration limits; whereas severity/action unit-based measures above the line 30804 may represent unacceptable levels of vibration. An expert system, such as a system for predicting maintenance events for industrial machines may apply severity/action unit values for industrial machines in a simple comparison function that compares a severity/action unit value to the severity/action unit threshold value. When the unit value is below the threshold value, an impact on a prediction of a need for maintenance may be small or negligible. When the unit value is above the threshold value, an impact on a prediction of a need for maintenance may be substantive and may directly trigger predicting a maintenance event. Alternatively, the result of the comparison of a unit value with a threshold value may be used to adjust a weighting of other factors being processed to predict a maintenance event. Through severity/action unit weighting of other factors, predicting maintenance needs for industrial machines may combine below threshold or marginal results for vibration and other factors into a prediction of industrial machine maintenance.

In embodiments, severity units may be calculated using other signal processing techniques. These other signal processing techniques may produce an Action Unit normalized representation of the sensed vibration data. In embodiments, other frequency thresholds may be used with various techniques and may be dependent on various factors of the machine part(s) being vibrated, such as without limitation severity peak vibration levels, gas pulse frequency peak levels, machinery component type, bearing fault frequencies and the like. In embodiments, normalized severity/action units may be weighted based on a component type for applications, such as hammer mills, crushers, large horse power prime movers, soft-foundation (e.g., spring isolated) and the like. While the example of Figure 178 and others in this specification use a low threshold of 1200 Hz and a high threshold of 18,000 Hz, other values can be used, such as a low threshold of 500 Hz and a high threshold of 5,000 Hz and the like. The relationship between a low threshold and a high threshold for a given application may be based on a material, operating frequency, severity sensitivity, and the like.

Vibration events that may be detected through envelop processing and the like, such as for roller bearing defects that cause machine cycle dependent vibration events (e.g., a jolt as the roller bearing impacts the defect). Once vibration events detected through envelop processing are captured, they can be processed to result in a peak value that can be mapped to a severity unit frequency spectra. In this way, envelope-detected vibration events that may be filtered out through RMS or similar time-averaging calculations, can be mapped onto a Severity/Action Unit frequency chart.

In embodiments, severity for various components in an industrial machine or portion thereof (e.g., a gear box and the like) may be combined into an overall severity for the machine/portion. One approach is to generate an aggregated severity value by summing all the severity unit calculations for one or more components in the machine/portion. Another approach is to calculate an overall average severity for a machine/portion, such as by determining an average of the generated severity values. Other approaches for calculating an overall severity for a machine/portion may include weighting a portion of the individual component's severity value, and the like.

In embodiments, calculations of severity units for industrial machine components, such as moving parts in an industrial machine (e.g., gears, shafts, motors, too heads, and the like) may be mapped onto a severity graph as depicted in Figure 198 and described herein, such as by identifying in the map a correspondence between a spectral peak level and a measure of severity level. A mapped severity level may be determined based on the identification. Graphical elements may be assigned to each severity level so that a severity of an industrial machine component may be presented pictorially as, for example, an overlay of an image, drawing, or other representation that shows individual components in an industrial machine. Figure 200 depicts a block diagram representing components 30902 of an industrial machine 30900 with severity unit levels indicated by a graphical overlay elements 30904. In embodiments, the overlay image 30904' may be presented in a graphical user interface that may facilitate data discovery by a user who interacts with the overlay by, for example touching or otherwise selecting one of the graphical overlay elements 30904. Such a scenario is depicted in Figure 200. Component severity and related information in pop-up window 30908 is visualized in response to a user selecting the graphical overlay element 30904. In embodiments, the graphical overlay elements 30904 may represent composite severity levels for a group of components, such as a gear box, motor assembly and the like. When a composite graphical overlay element is selected, a second image, such as a detail of a gear box and the like may be visualized in the graphical user interface so that the user can dive into further details for the components in the assembly, and the like.

In embodiments, severity units may be presented in context of a Master Action Unit Nomogram (MAUN). In embodiments, vibration data may be collected for at least three dimensions; therefore, a 3-D MAUN that presents vibration data in action or severity units in a 3-D presentation may be produced.

In embodiments, raw vibration data may be provided to a predictive maintenance system, such as a system that applies techniques such as machine learning and the like to determine threshold for acceptable vibration across a range of spectra. However, learning from this raw information may require information about the environment and vibration analysis engineering that results in a highly complicated maintenance prediction operation. Severity Units, such as those described herein, including MAUN and the like, may be provided to the predictive maintenance system to simplify learning by more efficiently matching raw vibration data with normalized measures of vibration severity (e.g., Severity Units and the like). Use of Severity Units and the like may further reduce filtering and evaluation complexity for predictive maintenance systems since at least some portion of these operations may be incorporated into the generation of Severity Unit measures from the raw vibration data.

In embodiments, learning from such systems may be applied to Severity Unit calculation functions, such as may be performed locally by a data collection agent, local network processor, and the like as feedback. This feedback may be applied to threshold refinement algorithms that adjust, for example, severity level (e.g., threshold) determination from raw vibration data, so that vibration thresholds can be tuned for local conditions, and the like. Such feedback may further be useful in processes that attempt to determine which of a plurality of data processing techniques / algorithms (e.g., to produce Severity and/or Action Units and the like) may produce more accurate MAUN measures. Doing so may reduce processing complexity and reduce data storage demand, which may be desirable for reducing overall cost and sophistication of data collection devices and the like that may produce Severity Unit data.

In embodiments, predictive maintenance methods and systems may be applied to industrial machines, such as rotating equipment machines. Exemplary rotating equipment machines for which methods and systems of predictive maintenance described herein can be used may include, without limitation drills, boring heads, polishers, motors, turbines, gear boxes, transmissions, rotary-vibratory adapters, drive shafts, computer numerical controlled (CNC) routers, lathes, mills, grinders, centrifuges, combustion engines, compressors, reciprocating engines, pumps, fans, blowers, generators, and the like. Manufacturers of exemplary rotating equipment and related parties, such as testing services, component manufacturers, sub-contractors, and the like may have access to technical data about such equipment on a machine-by-machine basis. Additionally, information that may be available about machines, sub-assemblies, individual components, accessories, rotating integrated parts, and the like may include design parameters, test specifications, operating specifications, revisions to the products, and the like. This and related information may apply to one or more deployed machines, such as to a specific serial number, a product line of industrial machines, a given production version, a production run, and the like. Machine information available may cover aspects of the equipment that relate to one or more rotating components, such as a count of gear teeth of one or more gears (e.g., a gear box such as a helical gearbox, worm reduction gearbox, planetary gearbox and the like, a power transfer gear set, and the like), a count of motor rotor bars (e.g., rotor bars in a squirrel-cage rotor and winding, such as a synchronous motor, and the like), RPM rate for rotating components and the like. Additionally, information may be available and utilized for predictive maintenance event planning and execution of industrial machines, such as roller bearing-based systems including, without limitation (count of roller balls, count of balls, count of balls/roller, ball-to-roller contact angle(s), race dimension (e.g., inner and outer race dimensions), count of vanes, count of flutes, mode shape (e.g., relative displacement and the like) data.

Providing access to rotating equipment information, such as that exemplarily described herein, for predictive maintenance processing, such as with a predictive maintenance analysis circuit, may be automated through a range of means including, without limitation; (i) storing data that contains information about a portion of a rotating equipment machine in a non-volatile storage element integrated with or into the machine, or portion thereof, prior to deployment in the field; (ii) updating a non-volatile storage element integrated with or into the machine with the relevant rotating component information after or as part of deployment, such as during a deployment validation operation and the like; (iii) storing data representative of the rotating equipment specifications, measurements, production testing, and the like in a network accessible data storage facility (e.g., a cloud-based data storage facility indexed by at least one of part, sub-system, machine or the like identifier, such as a serial number or set thereof that associates a part (e.g., a roller bearing assembly) with a machine/deployment; (iv) a combination of (i) or (ii) and (iii), with at least a subset of information stored in the non-volatile data storage facility deployed with the machine (e.g., a serial number of the machine, serial number(s) of rotating equipment components, and the like) that can be used to identify the relevant information for a deployed machine from the network accessible data storage facility. To address commercial confidentiality concerns, some and/or all network-accessible information may be protected by security measures such as passwords and the like. Similarly, information stored on a non-volatile storage facility, such as an RFID disposed with the industrial machine, may include non-confidential information (e.g., serial number, model number and the like) that may be accessible to third-parties, and confidential information (e.g., performance data, last failure date, prediction of next failure, failure rate of the machine or sup-portion thereof, and the like) that may require explicit authentication to access.

Accessing such rotating equipment information may include use of a mobile data collector, such as a mobile phone equipped with a data collection circuit that interacts with proximal industrial machines to access at least the non-confidential portion of the RFID tag. As the data collection circuit is activated to communicate with industrial machines, predictive maintenance beneficial information about the proximal industrial machines (e.g. as described herein and the like) may be collected from the RFID directly or by apply indexing (e.g., URL and the like) information gathered from the RFID to access the pertinent information from a networked server that is hosting the indexing information. In an example, a URL, which may be public data accessible in the RFID and a serial number of the machine, which may be treated as confidential information, may be retrieve from the RFID by the remote data collector. The data collector may provide the retrieve information to a predictive maintenance system that would apply the retrieved information in a web query to the URL, and the like.

Because some industrial machine deployments may not provide access to external networks like the Internet (e.g., for security purposes and the like), information in the RFID may be gathered and applied to predictive maintenance circuit operations contemporaneously with gathering the information; however predictive maintenance functions that require information not available at the time of gathering (e.g., information that must be retrieved over the Internet) may be performed at a later time, such as when the data collection circuit has access to the Internet and the like. In embodiments, predictive maintenance event analysis may be performed on a suitably equipped data collection device (e.g., a mobile device with sufficient processing power and data storage, and the like) or on a server, such as a networked server and the like, or a combination thereof. Predictive maintenance event analysis may also be performed by computing equipment that is accessible over a network other than the Internet, such as a local area network that is accessible by the mobile data collector while in proximity to the industrial machine(s). Such a site-specific local area network may, with proper credentials presented from the mobile data collector, facilitate access to industrial machine rotating part-related information over the Internet and the like.

In embodiments, rotor bar defects and weakening may be a precursor to secondary deterioration that can lead to further and costly repairs, such as replacement of a rotor core and the like. Therefore, by detecting broken or weakening rotor bars, maintenance and repair costs may be minimized. Knowing the count of rotor bars may be a factor in determining when maintenance and/or service of one or more rotor bars may be best actioned. As an example, by applying a rotor bar failure rate to a formula that predicts when a rotor bar may fail, knowing a count of rotor bars for a given machine, among other things like cycle rate, age, and the like can facilitate predicting when conducting service and/or testing of rotor bar-based systems could beneficially be conducted. A predictive maintenance circuit predicts maintenance events for industrial and other machines may predict maintenance for a machine with a greater number of rotor bars sooner than for a comparable machine with fewer rotor bars.

In embodiments, predicting a maintenance event for a machine, such as a rotating equipment-based machine may be adapted from a predicted maintenance event for a similar machine while factoring in a count of gear teeth in the machine and the similar machine. An aspect of predicting the maintenance event that may be affected by, for example a count of gear teeth, may be a timing of the event. In an example, a machine with a greater number of gear teeth relative to the similar machine may suggest predicting a need for maintaining the machine with the greater number of gear teeth sooner than the similar machine. In embodiments, predicting a maintenance event for a moving part of machine, such as a rotating equipment-based part may be adapted from a predicted maintenance event for a similar part in the same or similar machine while factoring in a count of gear teeth in the machine and the similar part or machine. In embodiments, predicting a maintenance event for a rotating part of machine, such as a rotating part of a rotating equipment-based machine may be adapted from a predicted maintenance event for a similar rotating part in the same or similar machine while factoring in a count of gear teeth in the machine and the similar part or machine. In embodiments, predicting a maintenance event for a gear box and the like, such as a rotating equipment-based gear box may be adapted from a predicted maintenance event for a similar part in the same or similar machine while factoring in a count of gear teeth in the machine and the similar part or machine. In embodiments, predicting a maintenance event for a component of a machine comprising a multi-tooth gear, such as a rotating equipment-based component may be adapted from a predicted maintenance event for a similar component in the same or similar machine while factoring in a count of gear teeth in the machine and the similar component or machine.

In embodiments, predicting a maintenance event for a rotating equipment may be a function of a predictive maintenance circuit that is, for example, responsive to a count of gear teeth of a rotatable component of a machine for which the predictive maintenance circuit products a maintenance event alert (e.g., a signal that facilitates triggering at least an automated portion of a maintenance event, such as ordering a replacement part and the like). In embodiments, the predictive maintenance circuit may process operational data for the machine or rotating portion thereof, and/or may process failure data for a specific rotating component and the like of the machine or similar machines; thereby incorporating contextual information about the specific machine with static information about the machine such as gear teeth count and the like in the prediction.

In embodiments, a count of gear teeth for a service component, such as from an RFID component integrated with or into an industrial machine, such as a rotary equipment, may be input to a machine learning circuit that may process the input along with service information for similar service components across a plurality of industrial machines. The machine learning circuit may generate a predictive maintenance adjustment factor that can be applied to the predictive maintenance circuit processing thereby producing a machine-specific predictive maintenance event.

In embodiments, predicting a maintenance event for a rotating equipment may be a function of a predictive maintenance circuit that is, for example, responsive to a count of motor rotor bars of a rotatable component of a machine for which the predictive maintenance circuit products a maintenance event alert. In embodiments, a count of motor rotor bars for a service component, such as from an RFID component integrated with or into an industrial machine, such as a rotary equipment, may be input to a machine learning circuit that may process the input along with service information for similar service components across a plurality of industrial machines. The machine learning circuit may generate a predictive maintenance adjustment factor that can be applied to the predictive maintenance circuit processing thereby producing a machine-specific predictive maintenance event.

In embodiments, predicting a maintenance event for a rotating equipment may be a function of a predictive maintenance circuit that is, for example, responsive to data representative of a revolutions per minute of, for example, an internal rotatable component of a machine for which the predictive maintenance circuit products a maintenance event alert. In embodiments, RPM data for a service component, such as from an RFID component integrated with or into an industrial machine, such as a rotary equipment, may be input to a machine learning circuit that may process the input along with service information for similar service components across a plurality of industrial machines. The machine learning circuit may generate a predictive maintenance adjustment factor that can be applied to the predictive maintenance circuit processing thereby producing a machine-specific predictive maintenance event.

In embodiments, predicting a maintenance event for a rotating equipment may be a function of a predictive maintenance circuit that is, for example, responsive to data representative of an aspect of a roller bearing, such as a number of balls per roller, a ball-to-roller contact angle, inner race dimensions, outer race dimensions, a number of vanes, a number of flutes, mode shape info, and the like of a rotatable component of a machine for which the predictive maintenance circuit products a maintenance event alert. In embodiments, roller-bearing aspect data for a service component, such as from an RFID component integrated with or into an industrial machine, such as a rotary equipment, may be input to a machine learning circuit that may process the input along with service information for similar service components across a plurality of industrial machines. The machine learning circuit may generate a predictive maintenance adjustment factor that can be applied to the predictive maintenance circuit processing thereby producing a machine-specific predictive maintenance event. In embodiments, a predicted maintenance event may be selected from a list of maintenance events including, without limitation part replacement, machine sub-system replacement, calibration, deep data collection, machine servicing, machine shutdown, preventive maintenance, and the like.

In embodiments, at least one aspect of a roller bearing service component may be stored in a portion of digital data structure of roller bearing component production information retrieved through an RFID component disposed with the roller bearing component into an industrial machine. In embodiments, the portion of the digital data structure may be specific to the industrial machine with which the roller bearing component is disposed. In embodiments, the portion of the digital data structure may be retrieved by accessing a network location retrieved from the RFID component and further indexed by a machine-specific identifier retrieved from the RFID component. In embodiments, the network location may be accessed through a WiFi interface of a data collection device while the data collection device is in short range wireless communication with the RFID component. Further in embodiments, the network location may be accessed through a WiFi interface of a data collection device when the data collection device is no longer in short range wireless communication with the RFID component. In embodiments, the portion of the digital data structure may be retrieved by providing a machine-specific key retrieved from the RFID component to an Application Programming Interface function of a predictive maintenance system that facilitates access to roller bearing component production information stored external to the industrial machine. In embodiments, the portion of the digital data structure may include production information retrieved from the RFID component. In embodiments, the circuit predicts a maintenance event for the roller bearing component responsive to retrieving the portion of the digital data structure from the RFID component independent of network connectivity of a processor executing the circuit. Yet further in embodiments, a data collection device may include the predictive maintenance circuit that predicts a maintenance event for the roller bearing component responsive to retrieving the portion of the digital data structure from the RFID component independent of network connectivity of the data collection device.

Referring to Figure 201, a diagram of a data structure 31000 for storing rotating part-related information for use in, among other things, predicting a maintenance event for a portion of an industrial machine associated with the rotating part is depicted. A rotating component 31002 may include a specific gear of an industrial machine, a gear in a gearbox, a shaft, roller bearings and the like. Parameters 31004 for each rotating component may include, without limitation, count of teeth, count of gears, type(s) of gears in a gear box, rotation rate, count of balls, race dimensions, number of vanes and the like. Values 31006 for each rotating component-parameter combination may be stored in the data structure 31000. This data structure maybe representative of a portion of rotating part data stored on an RFID component deployed with an industrial machine. The number of entries on the data structure, types of data in the data structure, and formats for values (e.g., decimal, hexadecimal, and the like) may vary as needed to support storing rotating part-related configuration, production and test information.

Referring to Figure 202, a flow chart is depicted that represents a method for predicting a maintenance event for a rotating part, such as a gear, motor, roller bearing and the like based on as stream of sensed rotating part health data and part-specific configuration information, such as gear tooth count, roller bearing/chase dimensions, rotor bar count for a motor, and the like. A method 31100 may include a step 31102 of generating streams of health data for a rotating part, such as a gear, motor, roller bearing and the like. The method 31100 may continue with a step 31104 of accessing configuration information for the rotating part, such as from an RFID part deployed with the industrial machine hosting the rotating part and/or from a network-accessible data storage facility. The method 31100 may continue with a step 31106 of predicting at least one of a gear, motor, and/or roller bearing related maintenance event/action/likelihood. The method 31100 may continue with a step 31108 of producing orders for the predicted maintenance action to maintain, repair, and/or replace the rotating part for which a maintenance action/event is predicted. The method 31100 may continue with a step 31110 of validating the maintenance action(s) taken based on the rotating part based on service data for the maintenance event; such data for the maintenance event may be received by a processor, such as a networked server from the industrial machine and the like.

The present disclosure is also related to an Industrial Internet of Things (IIoT) system that is configured to address the above identified and other needs. More particularly, the present disclosure is directed to an IIoT platform that is optimized to improve the collection, storage, processing, sharing, and utilization of data in an industrial environment. The IIoT platform can be arranged in a plurality of distinct data-handling layers in a layered topology. This layered topology facilitates independent optimization of each of the data-handling layers. For example only, the layers can include a data collection/monitoring layer, a data storage layer, an adaptive intelligence layer, and an application platform layer. Each of the layers can have a micro-services architecture and interfaces to the other layers such that outputs, events, outcomes, etc. can be exchanged and shared across the layers. In this manner, and as mentioned above, each of the data-handling layers can be independently optimized for their specific functions (storage, monitoring, intelligence development, and applications) while permitting cross-layer sharing and optimization of the platform as a whole.

In one aspect, the IIoT platform can comprise a multi-application IIoT application platform that shares a common infrastructure that facilitates intelligence development and utilization. The common infrastructure provides for cross-application and cross-layer data sharing, including the sharing of events, outputs, and outcomes, to facilitate coordinated optimization (e.g., via machine learning) of the IIoT platform. The common data handling infrastructure can enable efficient monitoring of industrial entities and applications, as well as efficient sharing of such gathered data, to provide an environment for rapid development and deployment of intelligence solutions. The common infrastructure can also provide a consistent user experience for multiple applications related to different industrial processes.

In another aspect, the IIoT platform can include an adaptive intelligence layer that provides adaptive intelligence solutions to the various components in the IIoT platform. The adaptive intelligence layer can include a set of data processing, artificial intelligence, and computational systems that develop, improve, or adapt processes in the IIoT platform. The adaptive intelligence layer utilizes data collected, generated, stored, or otherwise obtained by the IIoT platform. The data can, for example, be related to various entities in the industrial environment, including but not limited to machines, devices, processes, workflows, and combinations thereof. The adaptive intelligence layer can include an adaptive edge compute management system that adaptively manages edge computation, storage, and processing in the IIoT system. Additionally or alternatively, the adaptive intelligence layer can include a robotic process automation system that develops and deploys automation capabilities for at least one of the plurality of industrial entities in the IIoT system. Further, the adaptive intelligence layer can include a set of protocol adaptors that facilitate adaptive protocol transformations of data within the IIoT system. The adaptive intelligence layer can additionally or alternatively include an edge intelligence system that adapts edge computation resources. For example only, the edge intelligence system can adapt the edge computation resources such that computational resources are utilized in an optimized manner based on various constraints (speed, cost, etc.).

The adaptive intelligence layer can, in further aspects, include an adaptive networking system that adapts network communication in the IIoT system. In other aspects, the adaptive intelligence layer can include a set of state and event managers that adapt the processes in the IIoT system based on state and event data. An opportunity mining system (which may include and also be referred to herein as a set of opportunity miners) can also be included in the adaptive intelligence layer. The set of opportunity miners can identify opportunities for increased automation or intelligence in the IIoT system. Finally, the adaptive intelligence layer can include a set of artificial intelligence systems that develop, improve, or adapt processes in the IIoT system.

As mentioned above, the robotic process automation system develops and deploys automation capabilities for at least one of the plurality of industrial entities in the IIoT system. The robotic process automation system can develop such capabilities for each of the processes, workflows, etc. that is managed, controlled, or mediated by each of the applications in the multi-application IIoT application platform. Further, the robotic process automation system can develop such capabilities for combinations of the applications. Additionally or alternatively, the robotic process automation system can develop and deploy automation capabilities for various industrial processes, including but not limited to energy production processes, manufacturing processes, transport processes, storage processes, refining processes, distilling processes, fluid handling processes, energy storage processes, chemical processes, petrochemical processes, semiconductor processes, gas production processes, maintenance processes, service processes, repair processes, and supply chain processes.

The robotic process automation system can develop and deploy automation capabilities based on watching/monitoring software interactions (e.g., by workers with various software interfaces), hardware interactions (e.g., by watching workers actually interacting with or using machines, equipment, tools or the like), or combinations thereof. Further, the robotic process automation system can utilize data gathered, generated, or otherwise obtained from or about the IIoT platform to assist in its activities.

As briefly mentioned above, the set of protocol adaptors facilitate adaptive protocol transformations of data within the IIoT system. For example only, the set of protocol adaptors can facilitate adaptive in-flight data protocol transformations, communication network protocol transformations, and linking (gateways, routers, switches, etc.). In some aspects, this includes recognition of appropriate protocols used by various components and systems in each of the data handling layers and in each industrial environment such that data can be moved, stored, and processed regardless of the native storage format, processing format, or communication system protocol. In some aspects, the set of protocol adaptors can be self-organizing. The self-organizing protocol adaptor can facilitate adaptive in-flight data protocol transformation of the data by selecting at least one interface of a set of possible interfaces between communication nodes. Alternatively or additionally, the self-organizing protocol adaptor can facilitate adaptive in-flight data protocol transformation of the data by selecting an appropriate protocol for the data and, in some aspects, also transform the data to comply with the selected appropriate protocol.

As mentioned above, the adaptive intelligent systems layer can include an opportunity mining system that utilizes the data to identify opportunities for increased automation within the platform. The opportunity mining system can be configured to collect information within the platform and also within, about, and for a set of industrial environments and industrial entities that help identify and prioritize opportunities for increased automation and/or intelligence in the IIoT system. The opportunity mining system can, for example, utilize sensors (such as cameras or wearables) or other systems to observe clusters of workers by time, by type, and by location to identify labor-intensive areas and processes. Further, the opportunity mining system can characterize the extent of domain-specific or entity-specific knowledge or expertise required to undertake an action, use a program, use a machine, or the like, such as observing the identity, credentials, and experience of workers involved in given processes. Alternatively or additionally, in some implementations the opportunity mining system can include systems by which a developer can solicit or specify information that would be helpful (such as video showing an expert doing something) and provide consideration/rewards for providing the specified information.

In certain aspects, the adaptive intelligent systems layer can include an edge intelligence system that adapts edge computation resources. The edge intelligence system can adaptively manage "edge" computation, storage, and processing, such as by varying storage locations for data and processing locations (e.g., applying AI) between on-device storage, local systems, in the network, and in the cloud. The edge intelligence system can permit and facilitate the dynamic definition of what constitutes the "edge" for purposes of a given application, device, system, etc. Further, the edge intelligence system can permit adaptation of edge computation that is multi-application aware, such as accounting for Quality of Service, latency requirements, congestion, cost, and other factors.

In other aspects, the industrial entity-oriented data storage systems layer can include at least one geofenced virtual asset tag associated with one particular industrial entity of the plurality of industrial entities in the IIoT system. The at least one geofenced virtual asset tag can comprise a data structure that contains entity data about the one particular industrial entity and is linked to the proximity of the one particular industrial entity. Essentially, a geofenced virtual asset tag limits access as if the tag were physically located on an asset. IIoT devices within the geofence can be used to recognize the presence of a reader device (such as by recognition of an interrogation signal) and communicate, e.g., with help of protocol adaptors, with the geofenced virtual asset tag. Further, in some aspects IIoT devices can act as distributed blockchain nodes, such as for validation (such as by various consensus protocols) of enchained data, including transaction history for maintenance, repair, and service. IIoT devices in the geofence can collectively validate location and identity of a fixed asset, e.g., in a configuration in which neighbors validate other neighbors.

Referring to Figure 203, a platform 34900 for facilitating development of intelligence in an Industrial Internet of Things (IIoT) system is illustrated, including a set of systems, applications, processes, modules, services, layers, devices, components, machines, products, sub-systems, interfaces, connections, and other elements working in coordination to enable intelligent management of a set of industrial entities 34930 that may be part of, integrated with, linked to, or operated on by the platform 34900. Industrial entities 34930 may include any of the wide variety of assets, systems, devices, machines, facilities, individuals, or other entities mentioned throughout this disclosure or in the documents incorporated herein by reference, such as, without limitation: industrial machines 34952 and their components (factory components, power production machinery, turbines, motors, reactors, fluid handling systems, condensers, fans, software components, hardware components, electrical components, physical components, etc.); industrial processes 34950 (power production processes, software processes (including applications, programs, services, and others), factory production processes, manufacturing processes (e.g., semiconductor manufacturing processes, chemical manufacturing processes, petroleum manufacturing processes, biological manufacturing processes), service, maintenance and repair processes, diagnostic processes, security processes, safety processes and many others); wearable and portable devices 34948 (mobile phones, tablets, dedicated portable devices for industrial applications, data collectors (including mobile data collectors), sensor-based devices, watches, glasses, hearables, head-worn devices, clothing-integrated devices, arm bands, bracelets, neck-worn devices, AR/VR devices, headphones, etc.); workers 34944 (factory workers, maintenance and service personnel, managers, engineers, floor managers, warehouse workers, inspectors, refueling personnel, material handling workers, process supervisors, security personnel, safety personnel, etc.); robotic systems 34942 (physical robots, collaborative robots ("cobots"), software bots, etc.); and operating facilities 34940 (power production facilities, refineries, assembly facilities, manufacturing facilities, warehousing facilities, plants, factories, mining facilities, power extraction facilities, construction sites, exploration sites, drilling sites, harvesting sites, etc.), which may include, without limitation, storage and warehousing facilities IP138 (such as for warehousing inventory, components, packaging materials, goods, products, machinery, equipment, and other items); transportation facilities 34934 (ports, depots, hangars, transportation equipment, vehicles, docks, loading bays, assembly lines, and other facilities for moving goods, components, machinery, raw materials, and other items); and manufacturing facilities 34932 (such as for manufacturing, assembling, refining, finishing, packaging, or otherwise producing a wide variety of goods).

In embodiments, the platform 34900 may include a plurality of data handling layers 34908, each of which being configured to provide a set of capabilities that facilitate development and deployment of intelligence (such as for facilitating automation, machine learning, applications of artificial intelligence, intelligent transactions, state management, event management, and process management) for a wide variety of industrial applications and end uses. In some implementations, the data handling layers 34908 include an industrial monitoring systems layer 34906, an industrial entity-oriented data storage systems layer 34910 (referred to in some cases herein for convenience simply as a data storage layer 34910), an adaptive intelligent systems layer 34904, and an industrial management application platform layer 34902. Each of the data handling layers 34908 may include a variety of services, programs, applications, workflows, systems, components and modules, as further described herein and in the documents incorporated herein by reference. In certain implementations, each of the data handling layers 34908 (and optionally the platform 34900 as a whole) is configured such that one more of its elements can be accessed as a service by other layers 34908 or by other systems, e.g., by being configured as a platform-as-a-service deployed on a set of cloud infrastructure components in a microservices architecture. For example only, a data handling layer 34908 may have a set of interfaces 34980 (application programming interfaces (APIs), brokers, services, connectors, wired or wireless communication links, ports, human-accessible interfaces, software interfaces or the like) by which data may be exchanged between the data handling layer 34908 and other layers, systems or subsystems of the platform 34900, as well as with other systems (such as industrial entities 34930 or external systems, cloud-based or on-premises enterprise systems (e.g., accounting systems, resource management systems, customer-relationship management (CRM) systems, and supply chain management systems). Each of the data handling layers 34908 may include a set of services (e.g., microservices) for data handling, including facilities for data extraction, transformation, and loading; data cleansing and deduplication facilities; data normalization facilities; data synchronization facilities; data security facilities; computational facilities (e.g., for performing pre-defined calculation operations on data streams and providing an output stream); compression and decompression facilities; and analytic facilities (such as providing automated production of data visualizations).

In various aspects, each data handling layer 34908 has a set of interfaces 34980 (such as application programming interfaces or "APIs") for automating data exchange with each of the other data handling layers 34908. In aspects, the data handling layers 34908 are configured in a topology that facilitates shared data collection and distribution across multiple applications and uses within the platform 34900 by the industrial monitoring systems layer 34906. The industrial monitoring systems layer 34906 may include various data collection and management systems 34918 (referred to for convenience in some cases as data collection systems 34918) for collecting and organizing data collected from or about industrial entities 34930, as well as data collected from or about the various data layers 34908 or services and/or components thereof.

For example, a stream of physiological data from a wearable device worn by a worker 34944 on a factory floor can be distributed via the industrial monitoring systems layer 34906 to multiple distinct applications in the industrial management application platform layer 34902, such as one that facilitates monitoring the health of a worker and another that facilitates operational efficiency. In aspects, the industrial monitoring systems layer 34906 facilitates alignment (such as time-synchronization, normalization, or the like) of data that is collected with respect to one or more industrial entities 34930. For example, one or more video streams collected of a worker 34944 in an industrial environment, such as from a set of camera-enabled IoT devices, may be aligned with a common clock, so that the relative timing of a set of videos can be understood by systems that may process the videos, such as machine learning systems that operate on images in the videos, on changes between images in different frames of the video, or the like. In such an example, the industrial monitoring systems layer 34906 may further align a set of videos with other data, such as a stream of data from wearable devices, a stream of data produced by industrial systems (such as on-board diagnostic systems, telematics systems, and various other sensors), a stream of data collected by mobile data collectors, and any other data or data stream sensed, generated, or otherwise obtained. Configuring the industrial monitoring systems layer 34906 as a common platform (or set of microservices) that are accessed across many applications may dramatically reduce the number of interconnections required by an enterprise in order to have a growing set of applications monitoring a growing set of IoT devices and other systems and devices that are under its control.

In aspects, the data handling layers 34908 are configured in a topology that facilitates shared or common data storage across multiple applications and uses of the platform 34900 by the industrial entity-oriented data storage systems layer 34910, referred to herein for convenience in some cases simply as the storage layer 34910. For example, various data collected about the industrial entities 34930, as well as data produced by the other data handling layers 34908, may be stored in the industrial entity-oriented data storage systems layer 34910, such that any of the services, applications, programs, etc. of the various data handling layers 34908 can access a common data source. This may facilitate a dramatic reduction in the amount of data storage required to handle the enormous amount of data produced by or about industrial entities 34930 in the platform 34900. For example, a supply chain management application in the industrial management application platform layer 34902 (such as one for ordering replacement parts) may access the same data set about what parts have been replaced for a set of machines as a predictive maintenance application that is used to predict whether a machine is likely to require repairs. In aspects, the industrial entity-oriented data storage systems layer 34910 may provide an extremely rich environment for collection of data that can be used for extraction of features or inputs for intelligence systems, such as expert systems, artificial intelligence systems, robotic process automation systems, machine learning systems, deep learning systems, supervised learning systems, or other intelligent systems as disclosed throughout this disclosure and the documents incorporated herein by reference. As a result, each application in the industrial management application platform layer 34902 and each adaptive intelligent system in the adaptive intelligent systems layer 34904 can benefit from the data collected or produced by or for each of the others.

A wide range of data types may be stored in the storage layer 34910 using various storage media and data storage types and formats, including, without limitation: asset and facility data 34920 (including asset identity data, operational data, transactional data, event data, state data, workflow data, maintenance data, and other data); worker data 34922 (including identity data, role data, task data, workflow data, health data, performance data, quality data, and other data); event data 34924 (including data regarding process events, financial events, output events, input events, state-change events, operating events, repair events, maintenance events, service events, damage events, injury events, replacement events, refueling events, recharging events, supply events, and others); claims data 34954 (including data related to insurance claims, such as for business interruption insurance, product liability insurance, insurance on goods, facilities, or equipment, flood insurance, insurance for contract-related risks, and others; data related to product liability, general liability, workers compensation, injury, and other liability claims; and claims data relating to contracts, such as supply contract performance claims, product delivery requirements, warranty claims, indemnification claims, energy production requirements, delivery requirements, timing requirements, milestones, key performance indicators, and others); production data 34958 (such as data relating to energy production found in databases of public utilities or independent services organizations that maintain energy infrastructure; data relating to outputs of manufacturing; data related to outputs of mining and energy extraction facilities, drilling and pipeline facilities, and many others); and supply chain data 34960 (such as data related to items supplied, amounts, pricing, delivery, sources, routes, customs information, and other supply chain facets).

In aspects, the data handling layers 34908 are configured in a topology that facilitates shared adaptation capabilities, which may be provided, managed, mediated, etc. by one or more of a set of services, components, programs, systems, or capabilities of the adaptive intelligent systems layer 34904, referred to in some cases herein for convenience as the adaptive intelligence layer 34904. The adaptive intelligence systems layer 34904 may include a set of data processing, artificial intelligence, and computational systems 34914 that are described in more detail elsewhere throughout this disclosure. Thus, use of various resources, such as computing resources (available processing cores, available servers, available edge computing resources, available on-device resources - for single devices or peered networks, available cloud infrastructure, etc.), data storage resources (including local storage on devices, storage resources in or on industrial entities or environments (including on-device storage, storage on asset tags, local area network storage), network storage resources, cloud-based storage resources, database resources, and others), networking resources (including cellular network spectrum, wireless network resources, fixed network resources, and others), energy resources (available battery power, available renewable energy, fuel, grid-based power, etc.), may be optimized in a coordinated or shared way on behalf of an operator, enterprise, system, application, or the like, such as for the benefit of multiple applications, programs, workflows, or other services/processes. For example, the adaptive intelligence layer 34904 may manage and provision available network resources for both an industrial analytics application and for an industrial remote control application such that low latency resources are used for remote control and longer latency resources are used for the analytics application. As described in more detail throughout this disclosure and the documents incorporated herein by reference, a wide variety of adaptations may be provided on behalf of the various services and capabilities across the various layers 34908, including ones based on application requirements, quality of service, budgets, costs, pricing, risk factors, operational objectives, optimization parameters, returns on investment, profitability, and uptime/downtime.

The industrial management application platform layer 34902, referred to in some cases herein for convenience as the application platform layer 34902, may include a set of industrial processes, workflows, activities, events, and applications 34912 (referred to individually and collectively, except where context indicates otherwise, as applications 34912) that enable an operator to manage more than one aspect of an industrial environment or industrial entity 34930 in a common application environment. The common application environment may permit the platform 34900 to take advantage of common data storage in the data storage layer 34910, common data collection or monitoring in the industrial monitoring systems layer 34906, and/or common adaptive intelligence of the adaptive intelligence systems layer 34904. Outputs from the applications 34912 in the application platform layer 34902 may be provided to the other data handing layers 34908. These may include, without limitation, state and status information for various objects, entities, processes, flows and the like; object information (such as identity, attribute, and parameter information for various classes of objects of various data types); event and change information (such as for workflows, dynamic systems, processes, procedures, protocols, and algorithms) including but not limited to timing information; outcome information (such as indications of success and failure, indications of process or milestone completion, indications of correct or incorrect predictions, indications of correct or incorrect labeling or classification, and success metrics such as those relating to yield, engagement, return on investment, profitability, efficiency, timeliness, quality of service, quality of product, customer satisfaction, and other measures of success). Outputs from each application 34912 can be stored in the data storage layer 34910, distributed for processing by the data collection layer 34906, and/or used by the adaptive intelligence layer 34904. The cross-application nature of the application platform layer 34902 thus facilitates convenient organization of all of the necessary infrastructure elements for adding intelligence to any given application, such as by supplying machine learning on outcomes across applications, providing enrichment of automation of a given application via machine learning based on outcomes from other applications (or other elements of the platform 34900), and allowing application developers to focus on application-native processes while benefiting from other capabilities of the platform 34900.

Referring to Figure 204, additional details, components, sub-systems, and other elements of an optional implementation of the platform 34900 of Figure 203 are illustrated. The industrial management application platform layer 34902 can include, in various optional implementations, a set of applications, systems, solutions, interfaces, or services (for convenience, referred to herein individually and collectively as applications 34912), by which an operator or owner of an industrial entity 34930, or other user, may manage, monitor, control, analyze, or otherwise interact with one or more elements of the industrial entity 34930. The set of applications 34912 may include one or more other applications 34912 that facilitates improved operation of an industrial entity, facility, or the like for the owner, operator, or other user, including but not limited to one or more of a blockchain-based industrial asset lifecycle management application 35002, an industrial asset lifecycle management application 35004, a process control optimization application 35010, a building automation and controls application 35012, an enterprise asset management application 35014, a cloud/PaaS/SaaS solution 35008, a factory operations visibility and intelligence (FOVI) application 35018, an autonomous manufacturing application 35020, a smart supply chain application 35022, an inventory quality control application 35024, and an industrial analytics application 35028.

In certain aspects, the one or more applications 34912 of the industrial management application platform layer 34902 and/or the artificial intelligence systems 35048 can include an artificial intelligence-enabled assistant 35089 that provides documentation related to an industrial entity 34930 (such as a machine and/or process that may require maintenance or repair), that provides diagnostics on the industrial entity 34930, and/or provides a set of recommendations for service, update, maintenance, replacement, repair, or other activity. This artificial intelligence-enabled assistant 35089 can be part of a suite of solutions or applications 34912 that use capabilities of the platform 34900 and the various shared microservices and layers (including artificial intelligence and advanced analytics) to enable preventative and predictive tasks related to the industrial entity 34930, such as downtime and maintenance management.

In further aspects, the applications 34912 can also include an asset performance management solution 35091 and/or an enterprise asset management application 35093 to, among other things, reduce the risk of failure or improve performance of various assets or industrial entities 34930, such as vehicles, manufacturing robots, turbines, mining equipment, elevators, transformers, motors, generators, and other machines or components thereof. Such solutions can use the data collection systems 34918 and other data sources to collect data from physical assets in near real-time and to provide information regarding operating conditions, process status, and/or fault conditions, as well as predict potential issues and other similar tasks. In aspects, recommendations can be provided for service, maintenance, repair, updates, or replacement, including, as described throughout this disclosure and the documents incorporated by reference, recommendations as to replacement parts, procedural information, identification of timing and schedule information, identification of personnel or entities capable of undertaking repairs, ratings, and other similar information.

In various implementations, applications 34912 may include industry-specific or entity-specific versions, such as for the energy industry, manufacturing industries, power generation industries, and mining industries. It should be appreciated that other entities/industries are contemplated and fall within the scope of the present disclosure. The data collected, organized, compiled, generated, utilized, etc. by the industry-specific or entity-specific versions can include industry specific risk models, models for performance and degradation of particular types of machines, and external data, such as on weather conditions, operational conditions, and/or market conditions.

In some implementations, hardware for machine learning at the edge can take the form of a single-board computer running an edge-based Tensor Processing Unit (TPU), as well as a system-on-module (SOM) (such as the recently announced SOM available from Coral™), and/or a USB-connected or other accessory device that brings machine learning inferencing to existing systems.

In certain aspects, the adaptive intelligent systems layer 34904 may include a set of systems, components, services, and other capabilities that collectively facilitate the coordinated development and deployment of intelligent systems, such as ones that can enhance one or more of the applications 34912 at the industrial management application platform layer 34902. The adaptive intelligence systems layer 34904 can include, for example, an adaptive edge compute management system 35030, a robotic process automation system 35042, a set of protocol adaptors 35602, a packet acceleration system 35034, an edge intelligence system 35038, an adaptive networking system 35040, a set of state and event managers 35044, a set of opportunity miners 35046, and a set of artificial intelligence systems 35048, although additional or fewer elements are possible.

In aspects, the industrial monitoring systems layer 34906 and its data collection systems 34918 may include a wide range of systems for collection of data. This layer may include, without limitation, real time monitoring systems 35068 (such as onboard monitoring systems like on-board diagnostics and telematics systems, monitoring infrastructure (such as cameras, motion sensors, and ambient sensors), as well as removable and replaceable monitoring systems, such as portable and mobile data collectors); software interaction observation systems 35050 (such as for logging and tracking events involved in interactions of users with software user interfaces (mouse movements, mouse clicks, cursor movements, keyboard interactions, navigation actions, eye movements, menu selections, etc.), as well as software interactions that occur as a result of other programs, such as over APIs); mobile data collectors 35052 (such as described herein and in documents incorporated by reference), visual quality detection systems 35054 (including use of video and still imaging systems, LIDAR, IR and other systems that allow visualization of materials, components, machines, housings, seals, bearings, and many other elements of industrial entities 34930, as well as inspection systems that monitor processes, activities of workers, and the like); on-board diagnostic (OBD) and telematics systems 35070 that can provide diagnostic codes and events via an event bus, communication port, or other communication system; physical process observation systems 35058 such as for tracking physical interactions of workers with other workers, workers with physical entities like machines and equipment, and physical entities with other physical entities, including, without limitation, video cameras, motion sensing systems (such as including optical sensors, LIDAR, IR and other sensor sets), and robotic motion tracking systems (such as tracking movements of systems attached to a human or a physical entity); machine condition monitoring systems 35060 (including onboard monitors and external monitors of conditions, states, operating parameters, or other measures of the condition of a machine); sensors and cameras 35062 (including onboard sensors, sensors in an industrial environment, cameras for monitoring an entire environment, dedicated cameras for a particular machine, process, worker, or other feature, wearable cameras, portable cameras, cameras disposed on mobile robots, cameras of portable devices like smart phones and tablets, and any of the many sensor types disclosed throughout this disclosure or in the documents incorporated herein by reference); indoor air quality monitoring systems 35072 (including chemical noses and other chemical sensor sets, as well as visual sensors); continuous emission monitoring systems 35074; indoor sound monitoring systems 35078; and any other of a wide variety of Internet of Things (IoT) data collectors, such as those described throughout this disclosure and in the documents incorporated by reference herein.

In certain implementations, and as mentioned above, the industrial entity-oriented data storage systems layer 34910 can include a range of systems for storage of data. These may include, without limitation, physical storage systems, virtual storage systems, local storage systems 35092, distributed storage systems, databases, memory, network-based storage, and network-attached storage systems 35082 (such as using non-volatile memory express ("NVMe"), storage attached networks, and other network storage systems). Additionally or alternatively, the storage layer 34910 may store data in one or more knowledge graphs 35080, such as a directed acyclic graph, a data map, a data hierarchy, or a self-organizing map. Further, the data storage layer 34910 may store data in an industrial digital thread 35084, such as for maintaining a longitudinal record of an industrial entity 34930 over time, including any of the entities described herein. As described further herein, the data storage layer 34910 may use and enable a virtual asset tag 35088, which may include a data structure that is associated with an asset and accessible and managed as if the tag were physically located on the asset, such as by use of access controls, so that storage and retrieval of data is optionally linked to local processes, but also optionally open to remote retrieval and storage options. In embodiments the storage layer 34910 may include one or more blockchains 35090, such as ones that store identity data, transaction data, historical interaction data, and other data, such as with access control that may be role-based or may be based on credentials associated with an industrial entity 34930, a service, or one or more applications 34912.

With further reference to Figure 205, the adaptive intelligence systems layer 34904 may include a robotic process automation ("RPA") system 35042 that includes a set of components, processes, services, interfaces, and other elements for development and deployment of automation capabilities for various industrial entities 34930, environments, and applications 34912. Without limitation, the robotic process automation system 35042 may apply automation capabilities to each of the processes that is managed, controlled, or mediated by each of the set of applications 34912 of the application platform layer 34902.

In aspects, the robotic process automation system 35042 may leverage the presence of multiple applications 34912 within the industrial management application platform layer 34902 such that a pair of applications may share data sources (such as in the data storage layer 34910) and other inputs (such as from the industrial monitoring systems layer 34906) that are collected with respect to industrial entities 34930, as well sharing outputs (such as events, state information, and other data), which collectively may provide a much richer environment for process automation, including through the use of artificial intelligence systems 35048 (including any of the various expert systems, artificial intelligence systems, neural networks, supervised learning systems, machine learning systems, deep learning systems, and other systems described throughout this disclosure and in the documents incorporated by reference).

For example, an inventory quality control application 35024 may use the robotic process automation system 35042 for automation of an inspection process that is normally performed or supervised by a human. The process could involve visual inspection using video or still images from a camera or other imaging device that displays images of an entity 34930, such as where the robotic process automation 35042 system is trained to automate the inspection by observing interactions of a set of human inspectors or supervisors with an interface that is used to identify, diagnose, measure, parameterize, or otherwise characterize possible defects in an item. In aspects, the interactions of the human inspectors or supervisors may include a labeled data set where labels or tags indicate types of defects or other characteristics such that a machine learning system can learn, using the training data set, to identify the same characteristics. The identification of the same characteristics can, in turn, be used to automate the visual quality detection process such that defects are automatically classified and detected in a set of video or still images, which in turn can be used within the inventory quality control application 35024 to flag items of inventory that should be rejected or otherwise require further inspection. In certain implementations, the robotic process automation system 35042 may involve multi-application or cross-application sharing of inputs, data structures, data sources, events, states, outputs, or outcomes. For example, the inventory quality application 35042 may receive information from a smart supply chain application 35022 in order to enrich the robotic process automation by the robotic process automation system 35042 of the inventory quality control application 35042, such as information about the expected characteristics of a product or other item from a particular vendor, which may assist in reducing false positive or false negatives in a visual inspection process. These and many other examples of multi-application or cross-application sharing for robotic process automation 35042 across the applications 34912 are encompassed by the present disclosure.

In various implementations, the robotic process automation system 35042 may operate on shared or converged processes among the various pairs of the applications 34912 of the industrial management application platform layer 34902, such as, without limitation, of a converged process involving factory operations visual intelligence (FOVI) system 35018 and process control optimization (PCO) system 35010, and integrated automation of blockchain-based industrial asset lifecycle management application 35002 with smart supply chain application 35022. Other examples are contemplated by this disclosure.

In certain aspects, the converged processes may include shared data structures for multiple applications 34912, including ones that track the same transactions on a blockchain but may consume different subsets of available attributes of the data objects maintained in the blockchain or ones that use a set of nodes and links in a common knowledge graph. For example, a transaction indicating a change of ownership of an industrial entity 34930 may be stored in a blockchain and used by multiple applications 34912, such as to enable role-based access control, role-based permissions for remote control, identity-based event reporting, and other functions. In aspects, converged processes may include shared process flows across applications 34912, including subsets of larger flows that are involved in one or more of a set of applications 34912. For example, a visual inspection flow about an entity 34930 may serve an inventory quality control application 35024, an industrial analytics application 35028, an enterprise asset management application 35014, and others.

In embodiments, the RPA system 35042 may provide robotic process automation for the wide range of industrial processes mentioned throughout this disclosure and the documents incorporated herein by reference, including without limitation energy production, manufacturing, transport, storage, refining, distilling, fluid handling, energy storage, chemical processes, petrochemical processes, semiconductor processes, gas production processes, maintenance processes, service processes, repair processes, supply chain processes, assembly line processes, inspection processes, purchase and sale processes, fault detection processes, and power utilization optimization processes.

An environment for development of robotic process automation may include a set of interfaces for developers in which a developer may configure an artificial intelligence system 35048 to take inputs from selected data sources of the data storage layer 34910 and events or other data from the industrial monitoring systems layer 34906 and supply them, such as to a neural network, either as inputs for classification or prediction, as outcomes, or for other purposes to the RPA system 35042. The RPA system 35042 may be configured to take one or more process and application outputs and outcomes 34928 from various applications 34912 to facilitate automated learning and improvement of classification, prediction, or other activities that are involved in a process that is intended to be automated.

In aspects, the development environment, and the resulting robotic process automation performed by the RPA system 35042, may involve monitoring a combination of both software program interaction observations (e.g., received from the software interaction observation systems 35050), such as by observing workers interacting with various software interfaces of applications 34912 involving industrial entities 34930, and physical process interaction observations (e.g., received from the physical process observation systems 35058), such as by watching workers interacting with or using machines, equipment, tools, or other components. In various implementations, observation of software interactions by the software interaction observation systems 35050 may include observation of interactions among software components with other software components, such as how one application 34912 interacts via APIs with another application 34912. In certain aspects, observation of physical process interactions by the physical process observation systems 35058 may include observation (such as by video cameras, motion detectors, or other sensors) as well as detection of various physical interactions between industrial entities 34930 and/or its individual elements. For example only, such physical interactions can include without limitation observation/detection of positions, movements, and the like of hardware (such as robotic hardware), how human workers interact with industrial entities 34930 (such as locations of workers, including routes taken through a facility, where workers of a given type are located during a given set of events, processes or the like, how workers manipulate pieces of equipment or other items using various tools and physical interfaces, the timing of worker responses with respect to various events (e.g., responses to alerts and warnings), procedures by which workers undertake scheduled maintenance, updates, repairs, and service processes, procedures by which workers tune or adjust items involved in production). Physical process observation systems 35058 may track positions, angles, forces, velocities, acceleration, pressures, torque, and other characteristics of a worker as the worker operates on hardware (such as with a tool). Such observations may be obtained by any combination of video data, data detected within a machine (such as of positions of elements of the machine detected and reported by position detectors), data collected by a wearable device (such as an exoskeleton that contains position detectors, force detectors, torque detectors, and/or other sensors that is configured to detect the physical characteristics of interactions of a human worker with a hardware item for purposes of developing a training data set). By collecting both software interaction observations (e.g., with software interaction observation systems 35050) and physical process interaction observations (e.g., with physical process observation systems 35058), the RPA system 35042 can more comprehensively automate processes involving industrial entities 34930, such as by using software automation in combination with physical robots.

In various implementations, the RPA system 35042 is configured to train a set of physical robots that have hardware elements that facilitate undertaking tasks that are conventionally performed by humans. These may include robots that, among other activities, walk (including walking up and down stairs), climb (such as climbing ladders), move about a facility, attach to items, grip items (such as using robotic arms, hands, pincers, or the like), lift items, carry items, remove and replace items, and use tools.

Referring to Figure 206, an opportunity mining system 35046 may be provided as part of the adaptive intelligence layer 34904. The opportunity mining system 35046 may be configured to seek and recommend opportunities to improve one or more of the elements of the platform 34900, such as via addition of artificial intelligence systems 35048, automation (including robotic process automation, e.g., via robotic process automation system 35046 or otherwise), or the like to one or more of the systems, sub-systems, components, applications, or other aspects of the platform 34900 or other systems, applications, etc. with which the platform 34900 interacts. In aspects, the opportunity miners 35046 may be configured or used by developers of AI or RPA solutions to find opportunities for better solutions and to optimize existing solutions. In certain implementations, the opportunity mining system 35046 may include a set of systems that collect information within the platform 34900 and collect information within, about, and for a set of industrial environments and entities 34930, where the collected information has the potential to help identify and prioritize opportunities for increased automation and/or intelligence. For example only, the opportunity mining system 35046 may include systems that observe clusters of workers by time, by type, and by location, such as using cameras, wearables, or other sensors, to identify labor-intensive areas and processes in a set of industrial environments. These may be presented, such as in a ranked or prioritized list, or in a visualization (such as a heat map showing dwell times of workers on a map of an environment or a heat map showing routes traveled by workers within an environment) to show places with high labor activity. In various implementations, the industrial analytics application 35028 may be used to identify which environments or activities would most benefit from automation for purposes of labor saving.

In additional or alternative implementations, the opportunity mining system 35046 can include systems to characterize the extent of domain-specific or entity-specific knowledge or expertise required to undertake an action, use a program, use a machine, or perform any task in a process, for example, by observing the identity, credentials, experience, and/or other characteristics of worker(s) involved in the given process. This may be of particular benefit in situations where very experienced workers are involved (such as in maintenance or re-build processes on large or complex machines, or fine-tuning of complex processes where accumulated experience is required for effective work), especially where the population of those workers may be scarce (such as due to retirement or a dwindling supply of new workers having the same credentials). Thus, the opportunity mining system 35046 may collect and supply to an industrial analytics application 35028 (such as for prioritizing the development of automation such as RPA) data indicating what processes of or about an industrial entity 34930 are most intensively dependent on workers that have particular sets of experience or credentials (such as ones that have experience or credentials that are scarce or diminishing). The opportunity mining system 35046 may, for example, correlate aggregated data (including trend information) on worker ages, credentials, and/or experience (including by process type) with data on the processes in which those workers are involved (such as by tracking locations of workers by type, by tracking time spent on processes by worker type, or otherwise). A set of high value automation opportunities may be automatically recommended based on a ranking set, such as one that weights opportunities at least in part based on the relative dependence of a set of processes on workers who are scarce or are expected to become scarcer.

In various aspects, the opportunity mining system 35046 may use information relating to the cost of the workers involved in a set of processes, such as by accessing worker data 34922, including human resource database information indicating the salaries of various workers (either as individuals or by type), information about the rates charged by service workers or other contractors, or other form of cost data. The opportunity mining system 35046 may provide such cost information for correlation with process tracking information, such as to enable an industrial analytics application 35028 to identify what processes are occupying the most time of the most expensive workers. This may include visualization of such processes, such as by heat maps that show what locations, routes, or processes are involving the most expensive time of workers in industrial environments or with respect to industrial entities 34930. The opportunity mining system 35046 may supply a ranked list, weighted list, or other form of data set indicating to developers what areas are most likely to benefit from further automation or artificial intelligence deployment.

In certain aspects, the opportunity mining system 35046 may "mine" an industrial environment for RPA opportunities by searching a human resources database and/or other labor-tracking database for areas that involve labor-intensive processes. For example only, the opportunity mining system 35046 may search a system for areas where credentials of workers indicate a relatively high potential for automation, may track clusters of workers (e.g., via a wearable device or other sensor) to find labor-intensive machines or processes, and/or track clusters of workers (e.g., via a wearable device or other sensor) by type of worker to find labor-intensive processes.

The opportunity mining system 35046 may include facilities for solicitation of appropriate training data sets that may be used to facilitate process automation. Certain kinds of data or other inputs, if available, may provide very high value for automation, such as video data sets that capture very experienced and/or highly expert workers performing complex tasks. Thus, the opportunity mining system 35046 can search for such video data sets as described herein. In the absence of a successful search for such data, or to supplement available data, the platform 34900 may include systems by which a user, such as a developer, may specify a desired type of data, such as software interaction data (for example, of an expert working with a program to perform a particular task), video data (such as video showing a set of experts performing a certain kind of repair, an expert rebuilding a machine, an expert optimizing a certain kind of complex process, or similar), and/or physical process observation data (such as video or other type of sensor data).

The platform 34900 may be used to solicit such data, such as by offering some form of consideration (a monetary reward, tokens, cryptocurrency, licenses or rights, revenue sharing, or other consideration) to parties that provide data of the requested type. Rewards may be provided to parties for supplying pre-existing data and/or for undertaking steps to capture expert interactions, such as by taking video of a process. The resulting library of interactions captured in response to specification, solicitation, and rewards may be captured as a data set in the data storage layer 34910, such as for consumption by various applications 34912, elements of the adaptive intelligence systems layer 34904, and other processes and systems. In aspects, the library may include videos that are specifically developed as instructional videos to, among other uses, facilitate developing an automation map that can follow instructions in the video, such as by providing a sequence of steps according to a procedure or protocol, by breaking down the procedure or protocol into sub-steps that are candidates for automation, and the like. For example only, such instructional videos may be processed by natural language processing, such as to automatically develop a sequence of labeled instructions that can be used by a developer to facilitate a map, a graph, or other model of a process that assists with the development of automation for the process. In aspects, a specified set of training data sets may be configured to operate as inputs to learning. For example only, the training data may be time-synchronized with other data within the platform 34900 (such as outputs and outcomes from applications 34912, outputs and outcomes of industrial entities 34930, or the like) so that a given video of a process can be associated with those outputs and outcomes, thereby enabling feedback on learning that is sensitive to the outcomes that occurred for a captured process.

Referring to Figure 206, a set of opportunity miners 35046 may be provided as part of the adaptive intelligence layer 34904, which may be configured to seek and recommend opportunities to improve one or more of the elements of the platform 34900, such as via addition of artificial intelligence 35048, automation (including robotic process automation 35046), or the like to one or more of the systems, sub-systems, components, applications or the like of the platform 100 or with which the platform 100 interacts. In embodiments, the opportunity miners 35046 may be configured or used by developers of AI or RPA solutions to find opportunities for better solutions and to optimize existing solutions. In embodiments, the opportunity miners 35046 may include a s set of systems that collect information within the platform 100 and collect information within, about and for a set of industrial environments and entities 34930, where the collected information has the potential to help identify and prioritize opportunities for increased automation and/or intelligence. For example, the opportunity miners 35046 may include systems that observe clusters of workers by time, by type, and by location, such as using cameras, wearables, or other sensors, such as to identify labor-intensive areas and processes in set of industrial environments. These may be presented, such as in a ranked or prioritized list, or in a visualization (such as a heat map showing dwell times of workers on a map of an environment or a heat map showing routes traveled by workers within an environment) to show places with high labor activity. In embodiments, analytics 35028 may be used to identify which environments or activities would most benefit from automation for purposes of labor saving.

In embodiments, opportunity miners 35046 may include systems to characterize the extent of domain-specific or entity-specific knowledge or expertise required to undertake an action, use a program, use a machine, or the like, such as observing the identity, credentials and experience of workers involved in given processes. This may be of particular benefit in situations where very experienced workers are involved (such as in maintenance or re-build processes on large or complex machines, or fine-tuning of complex processes where accumulated experience is required for effective work), especially where the population of those workers may be scarce (such as due to retirement or a dwindling supply of new workers having the same credentials. Thus, a set of opportunity miners 35046 may collect and supply to an analytics solution 35028, such as for prioritizing the development of automation 35042, data indicating what processes of or about an industrial entity 34930 are most intensively dependent on workers that have particular sets of experience or credentials, such as ones that have experience or credentials that are scarce or diminishing. The opportunity miners 35046 may, for example, correlate aggregated data (including trend information) on worker ages, credentials, experience (including by process type) with data on the processes in which those workers are involved (such as by tracking locations of workers by type, by tracking time spent on processes by worker type, and the like). A set of high value automation opportunities may be automatically recommended based on a ranking set, such as one that weights opportunities at least in part based on the relative dependence of a set of processes on workers who are scarce or are expected to become more scarce.

In embodiments, the set of opportunity miners 35046 may use information relating to the cost of the workers involved in a set of processes, such as by accessing worker data 34922, including human resource database information indicating the salaries of various workers (either as individuals or by type), information about the rates charged by service workers or other contractors, or the like. An opportunity miner 35046 may provide such cost information for correlation with process tracking information, such as to enable an analytics solution 35028 to identify what processes are occupying the most time of the most expensive workers. This may include visualization of such processes, such as by heat maps that show what locations, routes, or processes are involving the most expensive time of workers in industrial environments or with respect to industrial entities 34930. The opportunity miners 35046 may supply a ranked list, weighted list, or other data set indicating to developers what areas are most likely to benefit from further automation or artificial intelligence deployment.

In embodiments, mining an industrial environment for robotic process automation opportunities may include searching an HR database and/or other labor-tracking database for areas that involve labor-intensive processes; searching a system for areas where credentials of workers indicating potential for automation; tracking clusters of workers by a wearable to find labor-intensive machines or processes; tracking clusters of workers by a wearable by type of worker to find labor-intensive processes, and the like.

In embodiments, opportunity mining may include facilities for solicitation of appropriate training data sets that may be used to facilitate process automation. For example, certain kinds of inputs, if available, would provide very high value for automation, such as video data sets that capture very experienced and/or highly expert workers performing complex tasks. Opportunity miners 35046 may search for such video data sets as described herein; however, in the absence of success (or to supplement available data), the platform may include systems by which a user, such as a developer, may specify a desired type of data, such as software interaction data (such as of an expert working with a program to perform a particular task), video data (such as video showing a set of experts performing a certain kind of repair, an expert rebuilding a machine, an expert optimizing a certain kind of complex process, or the like), physical process observation data (such as video, sensor data, or the like). The specification may be used to solicit such data, such as by offering some form of consideration (e.g., monetary reward, tokens, cryptocurrency, licenses or rights, revenue share, or other consideration) to parties that provide data of the requested type. Rewards may be provided to parties for supplying pre-existing data and/or for undertaking steps to capture expert interactions, such as by taking video of a process. The resulting library of interactions captured in response to specification, solicitation and rewards may be captured as a data set in the data storage layer 34910, such as for consumption by various applications 34912, adaptive intelligence systems 34904, and other processes and systems. In embodiments, the library may include videos that are specifically developed as instructional videos, such as to facilitate developing an automation map that can follow instructions in the video, such as providing a sequence of steps according to a procedure or protocol, breaking down the procedure or protocol into sub-steps that are candidates for automation, and the like. In embodiments, such videos may be processed by natural language processing, such as to automatically develop a sequence of labeled instructions that can be used by a developer to facilitate a map, a graph, or other model of a process that assists with development of automation for the process. In embodiments a specified set of training data sets may be configured to operate as inputs to learning. In such cases the training data may be time-synchronized with other data within the platform 34900, such as outputs and outcomes from applications 34912, outputs and outcomes of industrial entities 34930, or the like, so that a given video of a process can be associated with those outputs and outcomes, thereby enabling feedback on learning that is sensitive to the outcomes that occurred when a given process that was captured (such as on video, or through observation of software interactions or physical process interactions).

As noted elsewhere herein and in documents incorporated by reference, artificial intelligence (such as any of the techniques or systems described throughout this disclosure) may, in connection with various industrial entities 34930, functions and applications, be used to facilitate, among other things: (a) the optimization, automation and/or control of various functions, workflows, applications, features, resource utilization and other factors, (b) recognition or diagnosis of various states, entities, patterns, events, contexts, behaviors, or other elements; and/or (c) the forecasting of various states, events, contexts or other factors. As artificial intelligence improves, a large array of domain-specific and/or general artificial intelligence systems have become available and are likely to continue to proliferate. As developers seek solutions to domain-specific problems, such as ones relevant to industrial entities 34930 and various applications of the platform 34902 described throughout this disclosure they face challenges in selecting artificial intelligence models (such as what set of neural networks, machine learning systems, expert systems, or the like to select) and in discovering and selecting what inputs may enable effective and efficient use of artificial intelligence for a given problem. As noted above, opportunity miners 35046 may assist with the discovery of opportunities for increased automation and intelligence; however, once opportunities are discovered, selection and configuration of an artificial intelligence solution still presents a significant challenge, one that is likely to continue to grow as artificial intelligence solutions proliferate.

One set of solutions to these challenges is an artificial intelligence store FMRP104 that is configured to enable collection, organization, recommendation and presentation of relevant sets of artificial intelligence systems based on one or more attributes of a domain and/or a domain-related problem. In embodiments, an artificial intelligence store FMRP104 may include a set of interfaces to artificial intelligence systems, such as enabling the download of relevant artificial intelligence applications, establishment of links or other connections to artificial intelligence systems (such as links to cloud-deployed artificial intelligence systems via APIs, ports, connectors, or other interfaces) and the like. The artificial intelligence store FMRP104 may include descriptive content with respect to each of a variety of artificial intelligence systems, such as metadata or other descriptive material indicating suitability of a system for solving particular types of problems (e.g., forecasting, NLP, image recognition, pattern recognition, motion detection, route optimization, or many others) and/or for operating on domain-specific inputs, data or other entities. In embodiments, the artificial intelligence store FMRP104 may be organized by category, such as domain, input types, processing types, output types, computational requirements and capabilities, cost, energy usage, and other factors. In embodiments, an interface to the application store FMRP104 may take input from a developer and/or from the platform (such as from an opportunity miner 35046) that indicates one or more attributes of a problem that may be addressed through artificial intelligence and may provide a set of recommendations, such as via an artificial intelligence attribute search engine, for a subset of artificial intelligence solutions that may represent favorable candidates based on the developer's domain-specific problem. Search results or recommendations may, in embodiments, be based at least in part on collaborative filtering, such as by asking developers to indicate or select elements of favorable models, as well as by clustering, such as by using similarity matrices, k-means clustering, or other clustering techniques that associate similar developers, similar domain-specific problems, and/or similar artificial intelligence solutions. The artificial intelligence store FMRP104 may include e-commerce features, such as ratings, reviews, links to relevant content, and mechanisms for provisioning, licensing, delivery and payment (including allocation of payments to affiliates and or contributors), including ones that operate using smart contract and/or blockchain features to automate purchasing, licensing, payment tracking, settlement of transactions, or other features.

In embodiments, another set of solutions, which may be deployed alone or in connection with other elements of the platform, including the artificial intelligence store FMRP104, may include a set of functional imaging capabilities FMRP102, which may comprise monitoring systems 34906 and in some cases physical process observation systems 35058 and/or software interaction observation systems 35050, such as for monitoring various industrial entities 34930. Functional imaging systems FMRP102 may, in embodiments, provide considerable insight into the types of artificial intelligence that are likely to be most effective in solving particular types of problems most effectively. As noted elsewhere in this disclosure and in the documents incorporated by reference herein, computational and networking systems, as they grow in scale, complexity and interconnections, manifest problems of information overload, noise, network congestion, energy waste, and many others. As the Internet of Things grows to hundreds of billions of devices, and virtually countless potential interconnections, optimization becomes exceedingly difficult. One source for insight is the human brain, which faces similar challenges and has evolved, over millennia, reasonable solutions to a wide range of very difficult optimization problems. The human brain operates with a massive neural network organized into interconnected modular systems, each of which has a degree of adaptation to solve particular problems, from regulation of biological systems and maintenance of homeostasis, to detection of a wide range of static and dynamic patterns, to recognition of threats and opportunities, among many others. Functional imaging FMRP102, such as functional magnetic resonance imaging (fMRI), electroencephalogram (EEG), computed tomography (CT) and other brain imaging systems have improved to the point that patterns of brain activity can be recognized in real time and temporally associated with other information, such behaviors, stimulus information, environmental condition data, gestures, eye movements, and other information, such that via functional imaging FMRP102, either alone or in combination with other information collected by monitoring systems 34906, the platform may determine and classify what brain modules, operations, systems, and/or functions are employed during the undertaking of a set of tasks or activities, such as ones involving software interaction 35050, physical process observations 35058, or a combination thereof. This classification may assist in selection and/or configuration of a set of artificial intelligence solutions, such as from an artificial intelligence store FMRP104, that includes a similar set of capabilities and/or functions to the set of modules and functions of the human brain when undertaking an activity, such as for the initial configuration of a robotic process automation (RPA) system 35042 that automates a task performed by an expert human. Thus, the platform may include a system that takes input from a functional imaging system FRMP102 to configure, optionally automatically based on matching of attributes between one or more biological systems, such as brain systems, and one or more artificial intelligence systems, a set of artificial intelligence capabilities for a robotic process automation system. Selection and configuration may further comprise selection of inputs to robotic process automation and/or artificial intelligence that are configured at least in part based on functional imaging of the brain while workers undertake tasks, such as selection of visual inputs (such as images from cameras) where vision systems of the brain are highly activated, selection of acoustic inputs where auditory systems of the brain are highly activated, selection of chemical inputs (such as chemical sensors) where olfactory systems of the brain are highly activated, or the like. Thus, a biologically aware robotic process automation system may be improved by having initial configuration, or iterative improvement, be guided, either automatically or under developer control, by imaging-derived information collected as workers perform expert tasks that may benefit from automation.

Referring to Figure 207, additional details of an embodiment of the platform 34900 are provided, in particular relating to elements of the adaptive intelligent systems layer 34904 that facilitate improved edge intelligence, including the adaptive edge compute management system 35030 and the edge intelligence system 35038. These elements provide a set of systems that adaptively manage "edge" computation, storage and processing, such as by varying storage locations for data and processing locations (e.g., optimized by AI) between on-device storage, local systems, in the network, and in the cloud. The adaptive edge compute management system 35030 and the edge intelligence system 35038 enable facilitation of a dynamic definition by a user, such as a developer, operator, or host of the platform 100, of what constitutes the "edge" for purposes of a given application. For example only, for environments where data connections are slow or unreliable such as where an industrial facility does not have good access to cellular networks (e.g., due to remoteness of some environments (such as for drilling, construction, pipelining, or exploration), shielding or interference (such as where thick concrete or presence of large metal equipment interferes with networking performance), and/or congestion (such as where there are many devices seeking access to limited networking facilities)), edge computing capabilities can be defined and deployed to operate on the local area network of an environment, in peer-to-peer networks of devices, or on computing capabilities of local industrial entities 34930. Where strong data connections are available (such as where good backhaul facilities exist), edge computing capabilities can be disposed in the network, such as for caching frequently used data at locations that improve input/output performance, reduce latency, or otherwise improve performance of the platform 34900. Thus, adaptive definition and specification of where edge computing operations is enabled. This adaptive definition/specification can be under control of a developer or operator and/or determined automatically (such as by an expert system or automation system, e.g., based on detected network conditions for an environment, for an industrial entity 34930, or for a network as a whole). In certain implementations, the edge intelligence system 35038 can enable adaptation of edge computation (where computation occurs within various available networking resources, how networking occurs (e.g., by protocol selection), where data storage occurs, etc.) that is multi-application aware, such as accounting for QoS, latency requirements, congestion, and cost as understood and prioritized based on awareness of the requirements, the prioritization, and the value (including ROI, yield, and cost information, such as costs of failure) of edge computation capabilities across more than one application, including any combinations and subsets of the applications 34912 described herein or in the documents incorporated herein by reference.

In various aspects, the edge intelligence system 35038 can be enabled in part by edge computation capabilities, such as using a tensor processing unit (TPU), such as a single-board computing device running an edge-based Tensor Processing Unit (TPU) from Google™. In additional or alternative aspects, the edge intelligence system 35038 can use a system-on-module (SOM) capability, such as a Coral™ SOM, as well as one or more accessories that are configured to provide machine learning inferencing capabilities to edge devices and systems, e.g., USB-connected accessories, Power-over-Ethernt (PoE) powered accessories, and accessories connected via other local power and data protocols. Such capabilities for edge intelligence system 35038 can be deployed in edge devices and systems of or about various industrial entities 34930 and may be used to provide pattern recognition, prediction, inferencing, and the like for various purposes, such as for predictive maintenance, recommendation of service and repairs, anomaly detection, fault detection, recognition of process failures, process optimization, machine vision, visual inspection, robotics, process automation, status reporting, natural language processing, diagnostic condition recognition, and voice recognition.

For example only, the edge TPU may include an application-specific integrated circuit (ASIC) and may feature, for example, an NXP™ i.MX 8M system-on-chip (SOC), a quad-core Cortex-A53 and a Cortex-M4F, or similar processing device. The system can, for example, use a graphics GPU, such as an integrated GC7000 Lite Graphics GPU, with RAM (e.g., 1GB of RAM) and Flash memory (e.g., 8GB or more of Flash memory).

In implementations, the system may include a variety of ports to enable linking of edge intelligence capability to various edge devices and systems via various protocols, such as via a MicroSD slot, a Gigabit or other Ethernet port, PoE ports, and various audio ports. Various wireless protocols may be supported, including NFC, WiFi, Zigbee and Bluetooth 4.1. Connectivity may include wired connectivity such as USB connectivity, such as via Type-C OTG, a Type-C power connection, a Type-A 3.0 host, and/or a micro-B serial console. In aspects, the SOM can be integrated into an edge device or system, such as a Raspberry Pi or other Linux system, or a system using another conventional operating system. In further aspects, elements of the system can run a software operating system, such as a Linux-based system, such as Mendel™. Further, in certain implementations, models using an AI modeling system, such as TensorFlow™, can be compiled to run on the system.

Referring to Figure 208, additional details, components, sub-systems, and other elements of an example implementation of the industrial entity-oriented data storage systems layer 34910 of the platform 34900 are illustrated, relating in particular to implementations that include a geofenced virtual asset tag 35088. The virtual asset tag 35088 can be implemented as a data structure that contains data about an industrial entity 34930 (a machine, item of equipment, item of inventory, manufactured article, component, tool, device, worker, etc.), where the data is intended to be "tagged" to the asset. For example only, the data can relate uniquely to the particular asset (e.g., to a unique identifier for the individual asset) and can be linked to proximity to the asset (such as being geofenced to an area or location of or near the asset). The virtual asset tag 35088 is thus functionally equivalent to a physical asset tag, such as an RFID tag, in that it provides a local reader or similar device access to the data structure (as a reader would access an RFID tag) when the local reader or similar device is in proximity to the virtual asset stage 35088. In some aspects, access control can be managed and/or controlled as if the tag were physically located on an asset. For example only, certain data may be encrypted with keys that only permit it to be read, written to, modified, etc. by an operator who is verified to be in the proximity of a tagged industrial entity 34930. In this implementation, partitioning of local-only data processing from remote data processing can be enabled.

In some aspects, the virtual asset tag 35088 can be configured to recognize the presence of an RF reader or other reader (such as by recognition of an interrogation signal) and communicate with the reader (such as with the help of protocol adaptors), e.g., over an RF communication link or other communication protocol, notwithstanding the absence of a conventional RFID tag. This may occur by communications from IoT devices, telematics systems, and by other devices residing on a local area network. In additional or alternative embodiments, a set of IoT devices in an industrial environment can act as distributed blockchain nodes, such as for storage of virtual asset tag data, for tracking of transactions, and for validation (such as by various consensus protocols) of enchained data, including transaction history for maintenance, repair, and service. The IoT devices in a geofence can collectively validate location and identity of a fixed asset that is tagged by a virtual asset tag 35088, such as where peers or neighbors validate other peers or neighbors as being in a given location, thereby validating the unique identity and location of the asset. Validation can use voting protocols, consensus protocols, other protocols, or combinations thereof. In aspects, the identity of the industrial entities 34930 that are tagged can be maintained in a blockchain. Additionally or alternatively, in some aspects a virtual asset tag 35088 can include information that is related to an industrial digital thread 35084, such as historical information about an asset, its components, its history, etc.

Referring to Figure 209, in various aspects, the RPA system 35042 can be configured for developing and deploying one or more automation capabilities, including or enabling capabilities for a robot operational analytics system 35502. The robot operational analytics system 35502 can, in certain aspects, analyze operational actions of a set of robots, including with respect to location, mobility, and routing of mobile robots, as well as with respect to motions of robot components, such as where robots and/or robotic components are used within a wide range of protocols or procedures (such as manufacturing processes, assembly processes, transport processes, maintenance and repair processes, data collection processes).

In aspects, the RPA system 35042 may include or enable capabilities for machine learning on unstructured data 35508, including but not limited learning on a training set of human labels, tags, or other activities that allow characterization of the unstructured data, extraction of content from unstructured data, and/or generation of diagnostic codes or similar summaries from content of unstructured data. For example only, the RPA system 35042 may include sub-systems or capabilities for processing technical documents (such as technical data sheets, functional specifications, repair instructions, user manuals, and other documentation about industrial entities 34930), for processing human-entered notes (such as notes involved in diagnosis of problems, notes involved in prescribing or recommending actions, notes involved in characterizing operational activities, and notes involved in maintenance and repair operations), for processing information such as unstructured content contained on websites, social media feeds, etc. (such as information about products or systems in an industrial environment that can be obtained from vendor websites), and other documentation.

In certain aspects, the RPA system 35042 may comprise a unified platform with a set of RPA capabilities, as well as system(s) for monitoring (such as the systems of the monitoring layer 34906 and data collection systems 34918), raw data processing system(s) 35504 (including but not limited to systems for optical character recognition (OCR), natural language processing (NPL), computer vision processing, sound processing, and other forms of sensor processing); workflow characterization and management system(s) 35516; analytics system(s) 35510; artificial intelligence system(s) 35048; and administrative system(s) 35514 (such as for policy, governance, and provisioning of services, roles, access controls, etc. In certain implementations, the RPA system 35042 can include such capabilities as a set of microservices in a microservices architecture. The RPA system 35042 may have a set of interfaces to other platform layers 34908, as well as to external systems, for data exchange such that the RPA system 35042 can be accessed as an RPA platform-as-a-service by other platform layers 34908 and/or external systems that can benefit from one or more automation capabilities.

In embodiments, the RPA system 35042 may include a quality-of-work characterization system 35512 that can, e.g., identify high quality work as compared to other work or otherwise rate, gauge, or characterize work quality. Examples of such characterization of work quality services include recognizing human work as different from work performed by machines, recognizing which human work is likely to be of highest quality (such as work involving the most experienced or expensive personnel), recognizing which machine-performed work is likely to be of the highest quality (such as work that is performed by machines that have extensively learned on feedback from many outcomes, as compared to machines that are newly deployed), and recognizing which work has historically provided favorable outcomes (such as based on analytics or correlation to past outcomes). A set of thresholds may be applied, which may be varied under control of a developer or other user of the RPA system 35042, to indicate by type, by quality-level, or other measurement, which data sets indicating past work will be used for training within the machine learning systems that facilitate automation in the RPA system 35042.

As briefly mentioned above, a set of protocol adaptors can facilitate adaptive protocol transformations of data within the IIoT system. With reference to Figures 210-212, an example method and system for data processing in an industrial environment that utilizes protocol adaptors is illustrated in conjunction with the various components, interfaces, machines, devices, programs, methods, processes, protocols, and other elements collectively referred to herein as a platform 35600. In various implementations, the platform 35600 may include an intelligent, automated, machine learning, or otherwise "smart" protocol adaptor (referred to herein except where context indicates otherwise as a self-organizing protocol adaptor 35602) that may connect to one or more cloud, networked, and/or distributed computing platforms (referred to herein except where context indicates otherwise as IoT cloud platforms 35610).

The platform 35600 may include, connect to, or integrate with one or more sensors 35622 that may connect to the self-organizing protocol adaptor 35602 or to one or more IoT cloud platforms 35610. In this manner, the one or more sensors 35622 can provide information about the industrial environment, about one or more machines, components, or devices in the industrial environment, about one or more network conditions (such as network bandwidth, spectrum availability, congestion, interference, cost, timing, and/or availability), or about one or more cloud conditions or parameters. Among other things, the sensors 35622 may be used by the self-organizing protocol adaptor 35602 to facilitate organization or selection of an appropriate protocol by which one or more IoT devices (such as an industrial IoT device 35620 in an industrial environment 35624) can communicate. The platform 35600 may include one or more external data sources 35618 (such as databases, data warehouses, data streams, data packages, mobile data collectors, or other sources) that are located in the industrial environment 35624 or elsewhere, including in the cloud 35612. Various IoT devices 35620 can be located in the industrial environment 35624. In some aspects, an IoT cloud platform 35610 is deployed in the cloud 35612 and has one or more interfaces 35614 by which various networked devices, such as the industrial IoT devices 35620, can connect to the IoT cloud platform 35610 via one or more protocols 35608.

In aspects, the sensors 35612 may include one or more of touch ID, chemical, electrical, acoustic, vibration, acceleration, velocity, position, light, motion, temperature, magnetic fields, gravity, humidity, moisture, pressure, electrical fields, and sound sensors.

The self-organizing protocol adaptor 35602 can select, create, determine, and/or organize a self-organizing protocol, which can be at least one of a centralized protocol, a distributed protocol, and a hybrid protocol. In some aspects, the self-organizing protocol is self-organized by artificial intelligence, e.g., via at least one of an expert system, a machine learning system, a deep learning system, and a neural network to select, create, determine, and/or organize the self-organizing protocol. For example only, the IoT cloud platform 35610 can use one or more protocols 35608 selected from the group consisting of REST/HTTP, websockets, MQTT, CoAP, M2M IoT, Modbus, XMPP, and DDS, although any protocol that is suitable for use is within the scope of the present disclosure.

In some implementations, the IoT cloud platform 35610 is at least one of a Websphere platform, an AWS platform, an Azure platform, a Google cloud platform, an IBM Watson platform, an Oracle platform, an SAP platform, a GE Predix platform, a Cisco platform, and a Bosch platform. It should be appreciated, however, that the IoT cloud platform 35610 can be of any type or form. Further, in various aspects, the industrial IoT device 35620 may be one or more of internet protocol (IP) capable devices, non-IP capable devices, IoT client devices, low power devices, java devices, or any other suitable IoT device.

In various aspects, the industrial environment 35624 is one or more of an energy production environment, a manufacturing environment, an energy extraction environment, and a construction environment.

In additional or alternative implementations, methods and systems are provided for industrial data processing having a self-organizing protocol adaptor 35602 and having a smart industrial heater 35604.

In additional or alternative implementations, an IoT cloud platform 35610 may include an IoT data adaptor 35700. The IoT data adaptor 35700, as depicted in Figure 211, may receive IoT data 35710 as an input. Input can be received from any one or more than one of the many external data sources 35618 identified elsewhere in this disclosure (such as databases, data warehouses, data streams, data packages, and mobile data collectors), sensors 35622, and any other data source. In some implementations, the IoT data adaptor 35700 can establish a connection to publish the data to one or more available IoT cloud platforms 35610, or to any other device, server computing device, etc. capable of receiving data. In some aspects, the connection can also or alternatively be established to one or more available IoT cloud platforms 35610 by detecting conditions, e.g., with a condition detector 35716. The conditions can be related to the connection attempt or attempts made by the IoT data adapter 35700 to one or more IoT cloud platforms 35610. These conditions related to the attempt or attempts can include the receipt of reply messages 35718 from an IoT cloud platform 35610. The reply messages 35718 can indicate connection success or failure and/or can include content that suggests alternative protocols that might result in a successful connection being established or similar content, such as data from the cloud platform or usage indicators.

In some aspects, the data received from the IoT adapter 35700 by the IoT cloud platform 35610 can be published by the IoT cloud platform 35610 by automatically formatting, wrapping, translating, or otherwise preparing a data package 35720 or data stream 35722. The data package 35720 or data stream 35722 can be formatted in any one of the wide range of available data formats, such as, but not limited to, those described elsewhere in this disclosure.

Optionally, the IoT data adapter 35700 can include an adaptation engine 35724 for the implementation of the adaptation techniques described herein. The IoT data adapter 35700 can use adaptation techniques to establish a successful connection to one or more than one IoT cloud platforms 35610. The adaptation techniques can include using any of the machine-learning techniques described elsewhere in this disclosure.

The IoT data adaptor 35700, in various aspects, can also or alternatively make connections from a data marketplace. In such implementations, a data package 35720 related to a first connection of a new data source may prompt a user interface of an IoT cloud platform 35610 with a message that indicates the availability of a new data source, how to integrate the data source (for example by providing metadata about the data source and/or the terms for using the data), and other similar information.

With specific reference to Figure 212, an example connect attempt according to some aspects of the present disclosure is depicted. A sensor swarm 35810 attempts to establish an HTTP protocol connection 35814 to an IoT cloud platform 35610, through a condition detector 35716. The IoT cloud platform 35610 rejects the attempt to establish the HTTP protocol connection 35814 and sends a reply message 35718 to the IoT data adapter 35700 indicating the attempt failure. Upon receipt of the message indicating failure of the attempt to establish the HTTP protocol connection 35814, the adaptation engine 35724 can send a message to the sensor swarm 35810, through the condition detector 35716, indicative of the failure. Further, in some aspects the message from the adaptation engine 35724 can include information relating to a suggestion that the sensor swarm 35810 retry the connection to the IoT cloud platform 35610 using a different protocol, such as the illustrated MQTT protocol connection 35812. It should be appreciated that the example connect attempt illustrated in Figure 212 is merely illustrative and other connect attempts can include additional or fewer, or different, elements, messages, data, etc.

The present disclosure describes a system for data collection in an industrial production environment, the system according to one disclosed non-limiting embodiment of the present disclosure can include, a data acquisition circuit structured to interpret a plurality of detection values, each of the plurality of detection values corresponding to input received from at least one of a plurality of input sensors which includes a detection package, each of the plurality of input sensors operatively coupled to at least one of a plurality of components of an industrial production process, a data analysis circuit structured to analyze a subset of the plurality of detection values to determine a sensor performance value of at least one of the plurality of input sensors, and an analysis response circuit structured to adjust at least one of a sensor scaling value or a sensor sampling frequency value, in response to the sensor performance value.

In embodiments, the industrial production environment includes at least one of a chemical production process or a pharmaceutical production process.

In embodiments, the analysis response circuit is further structured to perform, in response to the sensor performance value, at least one operation selected from the operations consisting of enabling or disabling at least one of the plurality of sensors, modifying a sensor parameter of at least one of the plurality of input sensors, switch between two or more of the plurality of input sensors having distinct performance parameters, and switch between two or more of the plurality of input sensors having distinct locations.

In embodiments, the present disclosure may include data storage having at least one of calibration data or maintenance history data for at least one of the plurality of input sensors stored thereupon, and wherein the data acquisition circuit is further structured to calibrate the at least one of the plurality of input sensors in response to the sensor performance value.

In embodiments, the data analysis circuit is further structured to determine a current status of at least one of at least one of the plurality of components or a production process, and wherein the current status of the at least one of the plurality of components or the production process includes at least one of a current state of the one of the plurality of components, a current condition of the one of the plurality of components, a current stage of the production process, and a confirmation of the current stage of the production process.

In embodiments, the present disclosure may include situations, wherein the data analysis circuit is further structured to determine a future status of at least one of at least one of the plurality of components or a production process and wherein the future status of the at least one of the plurality of components or the production process includes at least one of a future state of the at least one of the plurality of components, a future condition of the at least one of the plurality of components, a future stage of the production process, and a confirmation of the future stage of the production process.

In embodiments, the present disclosure may include situations, wherein the analysis response circuit is further structured to adjust the detection package in response to the current status of the at least one of the plurality of components or the production process.

In embodiments, the present disclosure may include situations, wherein the current status of the at least one of the plurality of components or the production process includes at least one value selected from the values consisting of a process failure value, an off-nominal process value, a sensor failure value, and a maintenance requirement value, and wherein the analysis response circuit is further structured, in response to the current status of the at least one of the plurality of components or the production process, to perform at least one operation selected from the operations consisting of recommending an action, initiating a maintenance call, recommending a maintenance operation at an upcoming process stop, recommending changes in at least one of process parameters or operating parameters, changing an operating speed of the at least one of the plurality of components, initiating amelioration of an issue, and signaling for an alignment process.

The present disclosure describes a method for monitoring data collection for an industrial production process, the method according to one disclosed non-limiting embodiment of the present disclosure can include interpreting a plurality of detection values, each of the plurality of detection values corresponding to input received from at least one of a plurality of input sensors which includes a detection package, each of the plurality of input sensors operatively coupled to at least one of a plurality of components of the industrial production process, analyzing a subset of the plurality of detection values to determine a sensor performance value of at least one of the plurality of input sensors, and adjusting at least one of a sensor scaling value or a sensor sampling frequency value, in response to the sensor performance value.

In embodiments, the present disclosure may include, in response to the sensor performance value, performing at least one of enabling or disabling at least one of the plurality of sensors, modifying a sensor parameter of at least one of the plurality of input sensors, switching between two or more of the plurality of input sensors having distinct performance parameters, and switching between two or more of the plurality of input sensors having distinct locations.

In embodiments, the present disclosure may include situations, wherein the industrial production process includes at least one of a chemical production process or a pharmaceutical production process.

In embodiments, the present disclosure may include determining a current status of at least one of the plurality of components or a production process and wherein the current status of the at least one of the plurality of components or the production process includes at least one of a current state of the at least one of the plurality of components, a current condition of the at least one of the plurality of components, a current stage of the production process, and a confirmation of the current stage production process.

In embodiments, the present disclosure may include determining a future status of at least one of the plurality of components or a production process and wherein the future status of the at least one of the plurality of components or the production process includes at least one of a future state of the at least one of the plurality of components, a future condition of the at least one of the plurality of components, a future stage of the production process, and a confirmation of the future stage production process.

In embodiments, the present disclosure may include situations, wherein the current status of the at least one of the plurality of components or the production process includes at least one value selected from the values consisting of a component failure value, a process failure value, an off-nominal process value, a sensor failure value, and a maintenance required value, and, in response to the current status of the at least one of the plurality of components or the production process, performing at least one operation selected from the operations consisting of recommending an action, initiating a maintenance call, recommending a maintenance operation at an upcoming process stop, recommending changes in at least one of a process parameter or an operating parameter, changing an operating speed of the at least one of the plurality of components, initiating amelioration of an issue, and signaling for an alignment process.

The present disclosure describes an apparatus for data collection in an industrial production environment, the apparatus according to one disclosed non-limiting embodiment of the present disclosure can include a data acquisition component configured to interpret a plurality of detection values, each of the plurality of detection values corresponding to input received from at least one of a plurality of input sensors which includes a detection package, each of the plurality of input sensors operatively coupled to at least one of a plurality of components of an industrial production process, a data analysis component configured to analyze a subset of the plurality of detection values, and to determine a sensor performance value of at least one of the plurality of input sensors, and an analysis response component configured to adjust at least one of a sensor scaling value and a sensor sampling frequency value, in response to the sensor performance value.

In embodiments, the present disclosure may include situations, wherein the industrial production process includes at least one of a chemical production process or a pharmaceutical production process.

In embodiments, the present disclosure may include situations, wherein the analysis response component is further configured to perform, in response to the sensor performance value, at least one operation selected from the operations consisting of enabling or disabling at least one of the plurality of sensors, modifying a sensor parameter of at least one of the plurality of input sensors, switch between two or more of the plurality of input sensors having distinct performance parameters and switch between two or more of the plurality of input sensors positioned at distinct locations.

In embodiments, the present disclosure may include situations, wherein the data analysis component is further configured to determine a current status of at least one of at least one of the plurality of components or a production process and wherein the current status of the at least one of the plurality of components or the production process includes at least one of a current state of one of the at least one of the plurality of components, a current condition of the at least one of the plurality of components, a current stage of the production process, and a confirmation of the current stage of the production process.

In embodiments, the present disclosure may include situations, wherein the data analysis component is further configured to determine a future status of at least one of at least one of the plurality of components or a production process and wherein the future status of the at least one of the plurality of components or the production process includes at least one of a future state of the at least one of the plurality of components, a future condition of the at least one of the plurality of components, a future stage of the production process, and a confirmation of the future stage production process.

In embodiments, the present disclosure may include situations, wherein the current status of the at least one of the plurality of components or the production process includes at least one value selected from the values consisting of a component failure value, a process failure value, an off-nominal process value, a sensor failure value, and maintenance required value, and the analysis response circuit is further structured, in response to the current status of the at least one of the plurality of components or the production process, to perform at least one operation selected from the operations consisting of recommending an action, initiating a maintenance call, recommending maintenance at an upcoming process stop, recommending changes in at least one of process parameters or operating parameters, changing an operating speed of the at least one of the plurality of components, initiating amelioration of an issue, and signaling for an alignment process.

Methods and systems are disclosed herein for continuous ultrasonic monitoring, including providing continuous ultrasonic monitoring of rotating elements and bearings of an energy production facility; for cloud-based systems including machine pattern recognition based on the fusion of remote, analog industrial sensors or machine pattern analysis of state information from multiple analog industrial sensors to provide anticipated state information for an industrial system; for on-device sensor fusion and data storage for industrial IoT devices, including on-device sensor fusion and data storage for an Industrial IoT device, where data from multiple sensors are multiplexed at the device for storage of a fused data stream; and for self-organizing systems including a self-organizing data marketplace for industrial IoT data, including a self-organizing data marketplace for industrial IoT data, where available data elements are organized in the marketplace for consumption by consumers based on training a self-organizing facility with a training set and feedback from measures of marketplace success, for self-organizing data pools, including self-organization of data pools based on utilization and/or yield metrics, including utilization and/or yield metrics that are tracked for a plurality of data pools, a self-organized swarm of industrial data collectors, including a self-organizing swarm of industrial data collectors that organize among themselves to optimize data collection based on the capabilities and conditions of the members of the swarm, a self-organizing collector, including a self-organizing, multi-sensor data collector that can optimize data collection, power and/or yield based on conditions in its environment, a self-organizing storage for a multi-sensor data collector, including self-organizing storage for a multi-sensor data collector for industrial sensor data, a self-organizing network coding for a multi-sensor data network, including self-organizing network coding for a data network that transports data from multiple sensors in an industrial data collection environment.

Methods and systems are disclosed herein for training artificial intelligence ("AI") models based on industry-specific feedback, including training an AI model based on industry-specific feedback that reflects a measure of utilization, yield, or impact, where the AI model operates on sensor data from an industrial environment; for an industrial IoT distributed ledger, including a distributed ledger supporting the tracking of transactions executed in an automated data marketplace for industrial IoT data; for a network-sensitive collector, including a network condition-sensitive, self-organizing, multi-sensor data collector that can optimize based on bandwidth, quality of service, pricing, and/or other network conditions; for a remotely organized universal data collector that can power up and down sensor interfaces based on need and/or conditions identified in an industrial data collection environment; and for a haptic or multi-sensory user interface, including a wearable haptic or multi-sensory user interface for an industrial sensor data collector, with vibration, heat, electrical, and/or sound outputs.

Methods and systems are disclosed herein for a presentation layer for augmented reality and virtual reality (AR/VR) industrial glasses, where heat map elements are presented based on patterns and/or parameters in collected data; and for condition-sensitive, self-organized tuning of AR/VR interfaces based on feedback metrics and/or training in industrial environments.

In embodiments, a system for data collection, processing, and utilization of signals from at least a first element in a first machine in an industrial environment includes a platform including a computing environment connected to a local data collection system having at least a first sensor signal and a second sensor signal obtained from at least the first machine in the industrial environment. The system includes a first sensor in the local data collection system configured to be connected to the first machine and a second sensor in the local data collection system. The system further includes a crosspoint switch in the local data collection system having multiple inputs and multiple outputs including a first input connected to the first sensor and a second input connected to the second sensor. Throughout the present disclosure, wherever a crosspoint switch, multiplexer (MUX) device, or other multiple-input multiple-output data collection or communication device is described, any multi-sensor acquisition device is also contemplated herein. In certain embodiments, a multi-sensor acquisition device includes one or more channels configured for, or compatible with, an analog sensor input. The multiple outputs include a first output and second output configured to be switchable between a condition in which the first output is configured to switch between delivery of the first sensor signal and the second sensor signal and a condition in which there is simultaneous delivery of the first sensor signal from the first output and the second sensor signal from the second output. Each of multiple inputs is configured to be individually assigned to any of the multiple outputs, or combined in any subsets of the inputs to the outputs. Unassigned outputs are configured to be switched off, for example by producing a high-impedance state.

In embodiments, the first sensor signal and the second sensor signal are continuous vibration data about the industrial environment. In embodiments, the second sensor in the local data collection system is configured to be connected to the first machine. In embodiments, the second sensor in the local data collection system is configured to be connected to a second machine in the industrial environment. In embodiments, the computing environment of the platform is configured to compare relative phases of the first and second sensor signals. In embodiments, the first sensor is a single-axis sensor and the second sensor is a three-axis sensor. In embodiments, at least one of the multiple inputs of the crosspoint switch includes internet protocol, front-end signal conditioning, for improved signal-to-noise ratio. In embodiments, the crosspoint switch includes a third input that is configured with a continuously monitored alarm having a pre-determined trigger condition when the third input is unassigned to or undetected at any of the multiple outputs.

In embodiments, the local data collection system includes multiple multiplexing units and multiple data acquisition units receiving multiple data streams from multiple machines in the industrial environment. In embodiments, the local data collection system includes distributed complex programmable hardware device ("CPLD") chips each dedicated to a data bus for logic control of the multiple multiplexing units and the multiple data acquisition units that receive the multiple data streams from the multiple machines in the industrial environment. In embodiments, the local data collection system is configured to provide high-amperage input capability using solid state relays. In embodiments, the local data collection system is configured to power-down at least one of an analog sensor channel and a component board.

In embodiments, the local data collection system includes a phase-lock loop bandpass tracking filter configured to obtain slow-speed revolutions per minute ("RPMs") and phase information. In embodiments, the local data collection system is configured to digitally derive phase using on-board timers relative to at least one trigger channel and at least one of the multiple inputs. In embodiments, the local data collection system includes a peak-detector configured to autoscale using a separate analog-to-digital converter for peak detection. In embodiments, the local data collection system is configured to route at least one trigger channel that is raw and buffered into at least one of the multiple inputs. In embodiments, the local data collection system includes at least one delta-sigma analog-to-digital converter that is configured to increase input oversampling rates to reduce sampling rate outputs and to minimize anti-aliasing filter requirements. In embodiments, the distributed CPLD chips each dedicated to the data bus for logic control of the multiple multiplexing units and the multiple data acquisition units includes as high-frequency crystal clock reference configured to be divided by at least one of the distributed CPLD chips for at least one delta-sigma analog-to-digital converter to achieve lower sampling rates without digital resampling.

In embodiments, the local data collection system is configured to obtain long blocks of data at a single relatively high-sampling rate as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units each having an onboard card set configured to store calibration information and maintenance history of a data acquisition unit in which the onboard card set is located. In embodiments, the local data collection system is configured to plan data acquisition routes based on hierarchical templates.

In embodiments, the local data collection system is configured to manage data collection bands. In embodiments, the data collection bands define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system is configured to create data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the local data collection system includes a graphical user interface ("GUI") system configured to manage the data collection bands. In embodiments, the GUI system includes an expert system diagnostic tool. In embodiments, the platform includes cloud-based, machine pattern analysis of state information from multiple sensors to provide anticipated state information for the industrial environment. In embodiments, the platform is configured to provide self-organization of data pools based on at least one of the utilization metrics and yield metrics. In embodiments, the platform includes a self-organized swarm of industrial data collectors. In embodiments, the local data collection system includes a wearable haptic user interface for an industrial sensor data collector with at least one of vibration, heat, electrical, and sound outputs.

In embodiments, multiple inputs of the cross-point switch include a third input connected to the second sensor and a fourth input connected to the second sensor. The first sensor signal is from a single-axis sensor at an unchanging location associated with the first machine. In embodiments, the second sensor is a three-axis sensor. In embodiments, the local data collection system is configured to record gap-free digital waveform data simultaneously from at least the first input, the second input, the third input, and the fourth input. In embodiments, the platform is configured to determine a change in relative phase based on the simultaneously recorded gap-free digital waveform data. In embodiments, the second sensor is configured to be movable to a plurality of positions associated with the first machine while obtaining the simultaneously recorded gap-free digital waveform data. In embodiments, multiple outputs of the crosspoint switch include a third output and fourth output. The second, third, and fourth outputs are assigned together to a sequence of tri-axial sensors each located at different positions associated with the machine. In embodiments, the platform is configured to determine an operating deflection shape based on the change in relative phase and the simultaneously recorded gap-free digital waveform data.

In embodiments, the unchanging location is a position associated with the rotating shaft of the first machine. In embodiments, tri-axial sensors in the sequence of the tri-axial sensors are each located at different positions on the first machine but are each associated with different bearings in the machine. In embodiments, tri-axial sensors in the sequence of the tri-axial sensors are each located at similar positions associated with similar bearings but are each associated with different machines. In embodiments, the local data collection system is configured to obtain the simultaneously recorded gap-free digital waveform data from the first machine while the first machine and a second machine are both in operation. In embodiments, the local data collection system is configured to characterize a contribution from the first machine and the second machine in the simultaneously recorded gap-free digital waveform data from the first machine. In embodiments, the simultaneously recorded gap-free digital waveform data has a duration that is in excess of one minute.

In embodiments, a method of monitoring a machine having at least one shaft supported by a set of bearings includes monitoring a first data channel assigned to a single-axis sensor at an unchanging location associated with the machine. The method includes monitoring second, third, and fourth data channels each assigned to an axis of a three-axis sensor. The method includes recording gap-free digital waveform data simultaneously from all of the data channels while the machine is in operation and determining a change in relative phase based on the digital waveform data.

In embodiments, the tri-axial sensor is located at a plurality of positions associated with the machine while obtaining the digital waveform. In embodiments, the second, third, and fourth channels are assigned together to a sequence of tri-axial sensors each located at different positions associated with the machine. In embodiments, the data is received from all of the sensors simultaneously. In embodiments, the method includes determining an operating deflection shape based on the change in relative phase information and the waveform data. In embodiments, the unchanging location is a position associated with the shaft of the machine. In embodiments, the tri-axial sensors in the sequence of the tri-axial sensors are each located at different positions and are each associated with different bearings in the machine. In embodiments, the unchanging location is a position associated with the shaft of the machine. The tri-axial sensors in the sequence of the tri-axial sensors are each located at different positions and are each associated with different bearings that support the shaft in the machine.

In embodiments, the method includes monitoring the first data channel assigned to the single-axis sensor at an unchanging location located on a second machine. The method includes monitoring the second, the third, and the fourth data channels, each assigned to the axis of a three-axis sensor that is located at the position associated with the second machine. The method also includes recording gap-free digital waveform data simultaneously from all of the data channels from the second machine while both of the machines are in operation. In embodiments, the method includes characterizing the contribution from each of the machines in the gap-free digital waveform data simultaneously from the second machine.

In embodiments, a method for data collection, processing, and utilization of signals with a platform monitoring at least a first element in a first machine in an industrial environment includes obtaining, automatically with a computing environment, at least a first sensor signal and a second sensor signal with a local data collection system that monitors at least the first machine. The method includes connecting a first input of a cross-

point switch of the local data collection system to a first sensor and a second input of the crosspoint switch to a second sensor in the local data collection system. The method includes switching between a condition in which a first output of the crosspoint switch alternates between delivery of at least the first sensor signal and the second sensor signal and a condition in which there is simultaneous delivery of the first sensor signal from the first output and the second sensor signal from a second output of the crosspoint switch. The method also includes switching off unassigned outputs of the crosspoint switch into a high-impedance state.

In embodiments, the first sensor signal and the second sensor signal are continuous vibration data from the industrial environment. In embodiments, the second sensor in the local data collection system is connected to the first machine. In embodiments, the second sensor in the local data collection system is connected to a second machine in the industrial environment. In embodiments, the method includes comparing, automatically with the computing environment, relative phases of the first and second sensor signals. In embodiments, the first sensor is a single-axis sensor and the second sensor is a three-axis sensor. In embodiments, at least the first input of the crosspoint switch includes internet protocol front-end signal conditioning for improved signal-to-noise ratio.

In embodiments, the method includes continuously monitoring at least a third input of the crosspoint switch with an alarm having a pre-determined trigger condition when the third input is unassigned to any of multiple outputs on the crosspoint switch. In embodiments, the local data collection system includes multiple multiplexing units and multiple data acquisition units receiving multiple data streams from multiple machines in the industrial environment. In embodiments, the local data collection system includes distributed CPLD chips each dedicated to a data bus for logic control of the multiple multiplexing units and the multiple data acquisition units that receive the multiple data streams from the multiple machines in the industrial environment. In embodiments, the local data collection system provides high-amperage input capability using solid state relays.

In embodiments, the method includes powering down at least one of an analog sensor channel and a component board of the local data collection system. In embodiments, the local data collection system includes an external voltage reference for an A/D zero reference that is independent of the voltage of the first sensor and the second sensor. In embodiments, the local data collection system includes a phase-lock loop bandpass tracking filter that obtains slow-speed RPMs and phase information. In embodiments, the method includes digitally deriving phase using on-board timers relative to at least one trigger channel and at least one of multiple inputs on the crosspoint switch.

In embodiments, the method includes autoscaling with a peak-detector using a separate analog-to-digital converter for peak detection. In embodiments, the method includes routing at least one trigger channel that is raw and buffered into at least one of multiple inputs on the crosspoint switch. In embodiments, the method includes increasing input oversampling rates with at least one delta-sigma analog-to-digital converter to reduce sampling rate outputs and to minimize anti-aliasing filter requirements. In embodiments, the distributed CPLD chips are each dedicated to the data bus for logic control of the multiple multiplexing units and the multiple data acquisition units and each include a high-frequency crystal clock reference divided by at least one of the distributed CPLD chips for at least one delta-sigma analog-to-digital converter to achieve lower sampling rates without digital resampling. In embodiments, the method includes obtaining long blocks of data at a single relatively high-sampling rate with the local data collection system as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units and each data acquisition unit has an onboard card set that stores calibration information and maintenance history of a data acquisition unit in which the onboard card set is located.

In embodiments, the method includes planning data acquisition routes based on hierarchical templates associated with at least the first element in the first machine in the industrial environment. In embodiments, the local data collection system manages data collection bands that define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system creates data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the method includes controlling a GUI system of the local data collection system to manage the data collection bands. The GUI system includes an expert system diagnostic tool. In embodiments, the computing environment of the platform includes cloud-based, machine pattern analysis of state information from multiple sensors to provide anticipated state information for the industrial environment. In embodiments, the computing environment of the platform provides self-organization of data pools based on at least one of the utilization metrics and yield metrics. In embodiments, the computing environment of the platform includes a self-organized swarm of industrial data collectors. In embodiments, each of multiple inputs of the crosspoint switch is individually assignable to any of multiple outputs of the crosspoint switch.

Methods and systems described herein for industrial machine sensor data streaming, collection, processing, and storage may be configured to operate and integrate with existing data collection, processing and storage systems and may include a method for capturing a plurality of streams of sensed data from sensors deployed to monitor aspects of an industrial machine associated with at least one moving part of the machine; at least one of the streams contains a plurality of frequencies of data. The method may include identifying a subset of data in at least one of the plurality of streams that corresponds to data representing at least one predefined frequency. The at least one predefined frequency is represented by a set of data collected from alternate sensors deployed to monitor aspects of the industrial machine associated with the at least one moving part of the machine. The method may further include processing the identified data with a data processing facility that processes the identified data with an algorithm configured to be applied to the set of data collected from alternate sensors. Lastly, the method may include storing the at least one of the streams of data, the identified subset of data, and a result of processing the identified data in an electronic data set.

Methods and systems described herein for industrial machine sensor data streaming, collection, processing, and storage may be configured to operate and integrate with existing data collection, processing, and storage systems and may include a method for applying data captured from sensors deployed to monitor aspects of an industrial machine associated with at least one moving part of the machine. The data is captured with predefined lines of resolution covering a predefined frequency range and is sent to a frequency matching facility that identifies a subset of data streamed from other sensors deployed to monitor aspects of the industrial machine associated with at least one moving part of the machine. The streamed data includes a plurality of lines of resolution and frequency ranges. The subset of data identified corresponds to the lines of resolution and predefined frequency range. This method may include storing the subset of data in an electronic data record in a format that corresponds to a format of the data captured with predefined lines of resolution and signaling to a data processing facility the presence of the stored subset of data. This method may, optionally, include processing the subset of data with at least one set of algorithms, models and pattern recognizers that corresponds to algorithms, models and pattern recognizers associated with processing the data captured with predefined lines of resolution covering a predefined frequency range.

Methods and systems described herein for industrial machine sensor data streaming, collection, processing, and storage may be configured to operate and integrate with existing data collection, processing and storage systems and may include a method for identifying a subset of streamed sensor data, the sensor data captured from sensors deployed to monitor aspects of an industrial machine associated with at least one moving part of the machine, the subset of streamed sensor data at predefined lines of resolution for a predefined frequency range, and establishing a first logical route for communicating electronically between a first computing facility performing the identifying and a second computing facility, wherein identified subset of the streamed sensor data is communicated exclusively over the established first logical route when communicating the subset of streamed sensor data from the first facility to the second facility. This method may further include establishing a second logical route for communicating electronically between the first computing facility and the second computing facility for at least one portion of the streamed sensor data that is not the identified subset. Additionally, this method may further include establishing a third logical route for communicating electronically between the first computing facility and the second computing facility for at least one portion of the streamed sensor data that includes the identified subset and at least one other portion of the data not represented by the identified subset.

Methods and systems described herein for industrial machine sensor data streaming, collection, processing, and storage may be configured to operate and integrate with existing data collection, processing and storage systems and may include a first data sensing and processing system that captures first data from a first set of sensors deployed to monitor aspects of an industrial machine associated with at least one moving part of the machine, the first data covering a set of lines of resolution and a frequency range. This system may include a second data sensing and processing system that captures and streams a second set of data from a second set of sensors deployed to monitor aspects of the industrial machine associated with at least one moving part of the machine, the second data covering a plurality of lines of resolution that includes the set of lines of resolution and a plurality of frequencies that includes the frequency range. The system may enable selecting a portion of the second data that corresponds to the set of lines of resolution and the frequency range of the first data, and processing the selected portion of the second data with the first data sensing and processing system.

Methods and systems described herein for industrial machine sensor data streaming, collection, processing, and storage may be configured to operate and integrate with existing data collection, processing and storage systems and may include a method for automatically processing a portion of a stream of sensed data.

The sensed data is received from a first set of sensors deployed to monitor aspects of an industrial machine associated with at least one moving part of the machine. The sensed data is in response to an electronic data structure that facilitates extracting a subset of the stream of sensed data that corresponds to a set of sensed data received from a second set of sensors deployed to monitor the aspects of the industrial machine associated with the at least one moving part of the machine. The set of sensed data is constrained to a frequency range. The stream of sensed data includes a range of frequencies that exceeds the frequency range of the set of sensed data, the processing comprising executing an algorithm on a portion of the stream of sensed data that is constrained to the frequency range of the set of sensed data, the algorithm configured to process the set of sensed data.

Methods and systems described herein for industrial machine sensor data streaming, collection, processing, and storage may be configured to operate and integrate with existing data collection, processing and storage systems and may include a method for receiving first data from sensors deployed to monitor aspects of an industrial machine associated with at least one moving part of the machine. This method may further include detecting at least one of a frequency range and lines of resolution represented by the first data; receiving a stream of data from sensors deployed to monitor the aspects of the industrial machine associated with the at least one moving part of the machine. The stream of data includes: (1) a plurality of frequency ranges and a plurality of lines of resolution that exceeds the frequency range and the lines of resolution represented by the first data; (2) a set of data extracted from the stream of data that corresponds to at least one of the frequency range and the lines of resolution represented by the first data; and (3) the extracted set of data which is processed with a data processing algorithm that is configured to process data within the frequency range and within the lines of resolution of the first data.

The present disclosure describes a system for data collection related to a chemical production process, the system according to one disclosed non-limiting embodiment of the present disclosure can include a cross point switch including a plurality of inputs and a plurality of outputs, a plurality of sensors operatively coupled to at least one of a plurality of components of the chemical production process, and each communicatively coupled to at least one of the plurality of inputs of the cross point switch, a sensor data storage profile circuit structured to determine a data storage profile, the data storage profile including a data storage plan for the plurality of sensor data values, wherein the cross point switch is responsive to the data storage profile to selectively couple at least one of the plurality of inputs to at least one of the plurality of outputs, a sensor communication circuit communicatively coupled to the plurality of outputs of the cross point switch, and structured to interpret a plurality of sensor data values, and a sensor data storage implementation circuit structured to store at least a portion of the plurality of sensor data values in response to the data storage profile.

In embodiments, the data storage profile further includes at least one of a storage location for the at least one of the plurality of sensor data values, a time data storage trajectory including a plurality of time values corresponding to a plurality of storage locations over which the corresponding at least one of the plurality of sensor data values is to be stored, a time domain distribution over which the at least one of the plurality of sensor data values is to be stored, and location data storage trajectory including a plurality of storage locations over which the at least one of the plurality of sensor data values is to be stored.

In embodiments, the sensor data storage implementation circuit is further structured to store at least one of calibration data and maintenance history for at least one of the plurality of input sensors, and wherein the sensor communication circuit is further configured to perform one of calibrating the at least one of the plurality of input sensors and updating the maintenance history of the at least one of the plurality of input sensors.

In embodiments, the sensor communication circuit includes a plurality of distributed processing circuits. In embodiments, the chemical production process includes a pharmaceutical production process. In embodiments, the data storage profile further includes a data communication path, and wherein the plurality of sensor data values are communicated through a network infrastructure along the data communication path. In embodiments, the data storage profile further includes a plurality of data communication paths, and wherein a selected one of the plurality of data communication paths is determined in response to at least one hierarchical template.

A further embodiment of any of the foregoing embodiments of the present disclosure may further include situations where in the the sensor data storage profile circuit is further structured to select a hierarchical template in response to at least one condition selected from the conditions consisting of a component type associated with one of the plurality components, a process stage of the chemical production process, an operational mode for at least one of the chemical production process, one of the plurality of sensors, or one of the components, an operating condition of one of the plurality of components, a diagnostic operation for one of the plurality of components a diagnostic operation for the chemical production process an offset process from the chemical production process, a network availability for at least a portion of the network infrastructure a sensor availability for at least one of the plurality of sensors and an environmental condition associated with the chemical production process.

In embodiments, the sensor data storage profile circuit further includes at least one of a rule-based expert system or a model-based expert system. In embodiments, the at least one of the plurality of components of the chemical production process includes at least one component selected from the components consisting of a mechanical agitator, a rotating agitator, a propeller agitator, a pump, a mixing tank, a heating vessel, a variable speed motor, a fan, bearings and associated shafts, motors, rotors, stators, or gears.

The present disclosure describes a method for monitoring data collection in a chemical production facility, the method according to one disclosed non-limiting embodiment of the present disclosure can include interpreting a plurality of sensor data values from a plurality of sensors each operatively coupled to at least one of a plurality of components of a chemical production process, determining a data storage profile, the data storage profile including a data storage plan for the plurality of sensor data values, selectively coupling at least one of a plurality of inputs of a cross point switch to at least one of a plurality of outputs of the cross point switch in response to the data storage profile, wherein the each of the plurality of sensors are communicatively coupled to at least one of the plurality of inputs of the cross point switch, interrogating at least a portion of the plurality of sensor data values from the plurality of outputs of the cross point switch, and storing at least a portion of the interrogated sensor data values in response to the data storage profile.

In embodiments, the method further includes selectively communicating and storing the at least a portion of the interrogated sensor data values in a plurality of storage locations in response to the data storage profile.

In embodiments, selectively communicating and storing the at least a portion of the interrogated sensor data values includes performing at least one operation selected from the operations consisting of sequentially moving at least a portion of the interrogated sensor data values between storage locations, storing selected portions of the at least a portion of the interrogated sensor data values in selected storage locations for selected time periods, providing a time data storage trajectory for at least a portion of the interrogated sensor data values, providing a time domain distribution over which at least a portion of the interrogated sensor data values are to be stored and providing a location data storage trajectory over which at least a portion of the interrogated sensor data values are to be stored.

In embodiments, the method further includes storing at least one of calibration data and maintenance history for at least one of the plurality of input sensors, and performing one of calibrating at least one of the plurality of input sensors and updating the maintenance history of one of the plurality of input sensors.

In embodiments, the method further includes adjusting the data storage profile in response to a network resource value to move a data storage load between a first networked device and a second networked device, wherein the first networked device is communicatively disposed between the second networked device and the cross point switch.

In embodiments, the adjusting includes moving the data storage load toward the first networked device in response to at least one of the network resource value indicating a reduced network capacity and determining the first networked device includes sufficient storage capacity to store a selected amount of the portion of the interrogated sensor data until an expected network capacity increase event.

In embodiments, the adjusting includes moving the data storage load toward the second networked device in response to the network resource value indicating a sufficient network capacity.

The present disclosure describes monitoring apparatus for data collection related to a chemical production process, the apparatus according to one disclosed non-limiting embodiment of the present disclosure can include a sensor data storage profile component configured to determine a data storage profile, the data storage profile including a data storage plan for the plurality of sensor values, a sensor communication component configured to interpret a plurality of sensor values provided at outputs a cross point switch, each of the plurality of sensor values corresponding to input received from at least one of a plurality of input sensors, each of the plurality of input sensors operatively coupled to at least one of a plurality of components of the chemical production process and communicatively coupled to at least one input of the cross point switch, the inputs and outputs of the cross point switch selectively coupled based on the data storage profile and a sensor data storage implementation component configured to store at least a portion of the plurality of sensor values in response to the data storage profile.

In embodiments, at least one of the plurality of sensor values includes a sensor fusion value. In embodiments, the data storage profile further includes a data communication path, and wherein the plurality of sensor data values are communicated through a network infrastructure along the data communication path.

Methods and systems are disclosed herein for continuous ultrasonic monitoring, including providing continuous ultrasonic monitoring of rotating elements and bearings of an energy production facility; for cloud-based systems including machine pattern recognition based on the fusion of remote, analog industrial sensors or machine pattern analysis of state information from multiple analog industrial sensors to provide anticipated state information for an industrial system; for on-device sensor fusion and data storage for industrial IoT devices, including on-device sensor fusion and data storage for an Industrial IoT device, where data from multiple sensors are multiplexed at the device for storage of a fused data stream; and for self-organizing systems including a self-organizing data marketplace for industrial IoT data, including a self-organizing data marketplace for industrial IoT data, where available data elements are organized in the marketplace for consumption by consumers based on training a self-organizing facility with a training set and feedback from measures of marketplace success, for self-organizing data pools, including self-organization of data pools based on utilization and/or yield metrics, including utilization and/or yield metrics that are tracked for a plurality of data pools, a self-organized swarm of industrial data collectors, including a self-organizing swarm of industrial data collectors that organize among themselves to optimize data collection based on the capabilities and conditions of the members of the swarm, a self-organizing collector, including a self-organizing, multi-sensor data collector that can optimize data collection, power and/or yield based on conditions in its environment, a self-organizing storage for a multi-sensor data collector, including self-organizing storage for a multi-sensor data collector for industrial sensor data, a self-organizing network coding for a multi-sensor data network, including self-organizing network coding for a data network that transports data from multiple sensors in an industrial data collection environment.

Methods and systems are disclosed herein for training artificial intelligence ("AI") models based on industry-specific feedback, including training an AI model based on industry-specific feedback that reflects a measure of utilization, yield, or impact, where the AI model operates on sensor data from an industrial environment; for an industrial IoT distributed ledger, including a distributed ledger supporting the tracking of transactions executed in an automated data marketplace for industrial IoT data; for a network-sensitive collector, including a network condition-sensitive, self-organizing, multi-sensor data collector that can optimize based on bandwidth, quality of service, pricing, and/or other network conditions; for a remotely organized universal data collector that can power up and down sensor interfaces based on need and/or conditions identified in an industrial data collection environment; and for a haptic or multi-sensory user interface, including a wearable haptic or multi-sensory user interface for an industrial sensor data collector, with vibration, heat, electrical, and/or sound outputs.

Methods and systems are disclosed herein for a presentation layer for augmented reality and virtual reality (AR/VR) industrial glasses, where heat map elements are presented based on patterns and/or parameters in collected data; and for condition-sensitive, self-organized tuning of AR/VR interfaces based on feedback metrics and/or training in industrial environments.

In embodiments, a system for data collection, processing, and utilization of signals from at least a first element in a first machine in an industrial environment includes a platform including a computing environment connected to a local data collection system having at least a first sensor signal and a second sensor signal obtained from at least the first machine in the industrial environment. The system includes a first sensor in the local data collection system configured to be connected to the first machine and a second sensor in the local data collection system. The system further includes a cross-point switch in the local data collection system having multiple inputs and multiple outputs including a first input connected to the first sensor and a second input connected to the second sensor. Throughout the present disclosure, wherever a crosspoint switch, multiplexer (MUX) device, or other multiple-input multiple-output data collection or communication device is described, any multi-sensor acquisition device is also contemplated herein. In certain embodiments, a multi-sensor acquisition device includes one or more channels configured for, or compatible with, an analog sensor input. The multiple outputs include a first output and second output configured to be switchable between a condition in which the first output is configured to switch between delivery of the first sensor signal and the second sensor signal and a condition in which there is simultaneous delivery of the first sensor signal from the first output and the second sensor signal from the second output. Each of multiple inputs is configured to be individually assigned to any of the multiple outputs, or combined in any subsets of the inputs to the outputs. Unassigned outputs are configured to be switched off, for example by producing a high-impedance state.

In embodiments, the first sensor signal and the second sensor signal are continuous vibration data about the industrial environment. In embodiments, the second sensor in the local data collection system is configured to be connected to the first machine. In embodiments, the second sensor in the local data collection system is configured to be connected to a second machine in the industrial environment. In embodiments, the computing environment of the platform is configured to compare relative phases of the first and second sensor signals. In embodiments, the first sensor is a single-axis sensor and the second sensor is a three-axis sensor. In embodiments, at least one of the multiple inputs of the crosspoint switch includes internet protocol, front-end signal conditioning, for improved signal-to-noise ratio. In embodiments, the crosspoint switch includes a third input that is configured with a continuously monitored alarm having a pre-determined trigger condition when the third input is unassigned to or undetected at any of the multiple outputs.

In embodiments, the local data collection system includes multiple multiplexing units and multiple data acquisition units receiving multiple data streams from multiple machines in the industrial environment. In embodiments, the local data collection system includes distributed complex programmable hardware device ("CPLD") chips each dedicated to a data bus for logic control of the multiple multiplexing units and the multiple data acquisition units that receive the multiple data streams from the multiple machines in the industrial environment. In embodiments, the local data collection system is configured to provide high-amperage input capability using solid state relays. In embodiments, the local data collection system is configured to power-down at least one of an analog sensor channel and a component board.

In embodiments, the local data collection system includes a phase-lock loop bandpass tracking filter configured to obtain slow-speed revolutions per minute ("RPMs") and phase information. In embodiments, the local data collection system is configured to digitally derive phase using on-board timers relative to at least one trigger channel and at least one of the multiple inputs. In embodiments, the local data collection system includes a peak-detector configured to autoscale using a separate analog-to-digital converter for peak detection. In embodiments, the local data collection system is configured to route at least one trigger channel that is raw and buffered into at least one of the multiple inputs. In embodiments, the local data collection system includes at least one delta-sigma analog-to-digital converter that is configured to increase input oversampling rates to reduce sampling rate outputs and to minimize anti-aliasing filter requirements. In embodiments, the distributed CPLD chips each dedicated to the data bus for logic control of the multiple multiplexing units and the multiple data acquisition units includes as high-frequency crystal clock reference configured to be divided by at least one of the distributed CPLD chips for at least one delta-sigma analog-to-digital converter to achieve lower sampling rates without digital resampling.

In embodiments, the local data collection system is configured to obtain long blocks of data at a single relatively high-sampling rate as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units each having an onboard card set configured to store calibration information and maintenance history of a data acquisition unit in which the onboard card set is located. In embodiments, the local data collection system is configured to plan data acquisition routes based on hierarchical templates.

In embodiments, the local data collection system is configured to manage data collection bands. In embodiments, the data collection bands define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system is configured to create data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the local data collection system includes a graphical user interface ("GUI") system configured to manage the data collection bands. In embodiments, the GUI system includes an expert system diagnostic tool. In embodiments, the platform includes cloud-based, machine pattern analysis of state information from multiple sensors to provide anticipated state information for the industrial environment. In embodiments, the platform is configured to provide self-organization of data pools based on at least one of the utilization metrics and yield metrics. In embodiments, the platform includes a self-organized swarm of industrial data collectors. In embodiments, the local data collection system includes a wearable haptic user interface for an industrial sensor data collector with at least one of vibration, heat, electrical, and sound outputs.

In embodiments, multiple inputs of the cross-point switch include a third input connected to the second sensor and a fourth input connected to the second sensor. The first sensor signal is from a single-axis sensor at an unchanging location associated with the first machine. In embodiments, the second sensor is a three-axis sensor. In embodiments, the local data collection system is configured to record gap-free digital waveform data simultaneously from at least the first input, the second input, the third input, and the fourth input. In embodiments, the platform is configured to determine a change in relative phase based on the simultaneously recorded gap-free digital waveform data. In embodiments, the second sensor is configured to be movable to a plurality of positions associated with the first machine while obtaining the simultaneously recorded gap-free digital waveform data. In embodiments, multiple outputs of the crosspoint switch include a third output and fourth output. The second, third, and fourth outputs are assigned together to a sequence of tri-axial sensors each located at different positions associated with the machine. In embodiments, the platform is configured to determine an operating deflection shape based on the change in relative phase and the simultaneously recorded gap-free digital waveform data.

In embodiments, the unchanging location is a position associated with the rotating shaft of the first machine. In embodiments, tri-axial sensors in the sequence of the tri-axial sensors are each located at different positions on the first machine but are each associated with different bearings in the machine. In embodiments, tri-axial sensors in the sequence of the tri-axial sensors are each located at similar positions associated with similar bearings but are each associated with different machines. In embodiments, the local data collection system is configured to obtain the simultaneously recorded gap-free digital waveform data from the first machine while the first machine and a second machine are both in operation. In embodiments, the local data collection system is configured to characterize a contribution from the first machine and the second machine in the simultaneously recorded gap-free digital waveform data from the first machine. In embodiments, the simultaneously recorded gap-free digital waveform data has a duration that is in excess of one minute.

In embodiments, a method of monitoring a machine having at least one shaft supported by a set of bearings includes monitoring a first data channel assigned to a single-axis sensor at an unchanging location associated with the machine. The method includes monitoring second, third, and fourth data channels each assigned to an axis of a three-axis sensor. The method includes recording gap-free digital waveform data simultaneously from all of the data channels while the machine is in operation and determining a change in relative phase based on the digital waveform data.

In embodiments, the tri-axial sensor is located at a plurality of positions associated with the machine while obtaining the digital waveform. In embodiments, the second, third, and fourth channels are assigned together to a sequence of tri-axial sensors each located at different positions associated with the machine. In embodiments, the data is received from all of the sensors simultaneously. In embodiments, the method includes determining an operating deflection shape based on the change in relative phase information and the waveform data. In embodiments, the unchanging location is a position associated with the shaft of the machine. In embodiments, the tri-axial sensors in the sequence of the tri-axial sensors are each located at different positions and are each associated with different bearings in the machine. In embodiments, the unchanging location is a position associated with the shaft of the machine. The tri-axial sensors in the sequence of the tri-axial sensors are each located at different positions and are each associated with different bearings that support the shaft in the machine.

In embodiments, the method includes monitoring the first data channel assigned to the single-axis sensor at an unchanging location located on a second machine. The method includes monitoring the second, the third, and the fourth data channels, each assigned to the axis of a three-axis sensor that is located at the position associated with the second machine. The method also includes recording gap-free digital waveform data simultaneously from all of the data channels from the second machine while both of the machines are in operation. In embodiments, the method includes characterizing the contribution from each of the machines in the gap-free digital waveform data simultaneously from the second machine.

In embodiments, a method for data collection, processing, and utilization of signals with a platform monitoring at least a first element in a first machine in an industrial environment includes obtaining, automatically with a computing environment, at least a first sensor signal and a second sensor signal with a local data collection system that monitors at least the first machine. The method includes connecting a first input of a crosspoint switch of the local data collection system to a first sensor and a second input of the crosspoint switch to a second sensor in the local data collection system. The method includes switching between a condition in which a first output of the crosspoint switch alternates between delivery of at least the first sensor signal and the second sensor signal and a condition in which there is simultaneous delivery of the first sensor signal from the first output and the second sensor signal from a second output of the crosspoint switch. The method also includes switching off unassigned outputs of the crosspoint switch into a high-impedance state.

In embodiments, the first sensor signal and the second sensor signal are continuous vibration data from the industrial environment. In embodiments, the second sensor in the local data collection system is connected to the first machine. In embodiments, the second sensor in the local data collection system is connected to a second machine in the industrial environment. In embodiments, the method includes comparing, automatically with the computing environment, relative phases of the first and second sensor signals. In embodiments, the first sensor is a single-axis sensor and the second sensor is a three-axis sensor. In embodiments, at least the first input of the crosspoint switch includes internet protocol front-end signal conditioning for improved signal-to-noise ratio.

In embodiments, the method includes continuously monitoring at least a third input of the crosspoint switch with an alarm having a pre-determined trigger condition when the third input is unassigned to any of multiple outputs on the crosspoint switch. In embodiments, the local data collection system includes multiple multiplexing units and multiple data acquisition units receiving multiple data streams from multiple machines in the industrial environment. In embodiments, the local data collection system includes distributed CPLD chips each dedicated to a data bus for logic control of the multiple multiplexing units and the multiple data acquisition units that receive the multiple data streams from the multiple machines in the industrial environment. In embodiments, the local data collection system provides high-amperage input capability using solid state relays.

In embodiments, the method includes powering down at least one of an analog sensor channel and a component board of the local data collection system. In embodiments, the local data collection system includes an external voltage reference for an A/D zero reference that is independent of the voltage of the first sensor and the second sensor. In embodiments, the local data collection system includes a phase-lock loop bandpass tracking filter that obtains slow-speed RPMs and phase information. In embodiments, the method includes digitally deriving phase using on-board timers relative to at least one trigger channel and at least one of multiple inputs on the crosspoint switch.

In embodiments, the method includes auto-scaling with a peak-detector using a separate analog-to-digital converter for peak detection. In embodiments, the method includes routing at least one trigger channel that is raw and buffered into at least one of multiple inputs on the crosspoint switch. In embodiments, the method includes increasing input oversampling rates with at least one delta-sigma analog-to-digital converter to reduce sampling rate outputs and to minimize anti-aliasing filter requirements. In embodiments, the distributed CPLD chips are each dedicated to the data bus for logic control of the multiple multiplexing units and the multiple data acquisition units and each include a high-frequency crystal clock reference divided by at least one of the distributed CPLD chips for at least one delta-sigma analog-to-digital converter to achieve lower sampling rates without digital resampling. In embodiments, the method includes obtaining long blocks of data at a single relatively high-sampling rate with the local data collection system as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units and each data acquisition unit has an onboard card set that stores calibration information and maintenance history of a data acquisition unit in which the onboard card set is located.

In embodiments, the method includes planning data acquisition routes based on hierarchical templates associated with at least the first element in the first machine in the industrial environment. In embodiments, the local data collection system manages data collection bands that define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system creates data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the method includes controlling a GUI system of the local data collection system to manage the data collection bands. The GUI system includes an expert system diagnostic tool. In embodiments, the computing environment of the platform includes cloud-based, machine pattern analysis of state information from multiple sensors to provide anticipated state information for the industrial environment. In embodiments, the computing environment of the platform provides self-organization of data pools based on at least one of the utilization metrics and yield metrics. In embodiments, the computing environment of the platform includes a self-organized swarm of industrial data collectors. In embodiments, each of multiple inputs of the crosspoint switch is individually assignable to any of multiple outputs of the crosspoint switch.

Methods and systems described herein for industrial machine sensor data streaming, collection, processing, and storage may be configured to operate and integrate with existing data collection, processing and storage systems and may include a method for capturing a plurality of streams of sensed data from sensors deployed to monitor aspects of an industrial machine associated with at least one moving part of the machine; at least one of the streams contains a plurality of frequencies of data. The method may include identifying a subset of data in at least one of the plurality of streams that corresponds to data representing at least one predefined frequency. The at least one predefined frequency is represented by a set of data collected from alternate sensors deployed to monitor aspects of the industrial machine associated with the at least one moving part of the machine. The method may further include processing the identified data with a data processing facility that processes the identified data with an algorithm configured to be applied to the set of data collected from alternate sensors. Lastly, the method may include storing the at least one of the streams of data, the identified subset of data, and a result of processing the identified data in an electronic data set.

Methods and systems described herein for industrial machine sensor data streaming, collection, processing, and storage may be configured to operate and integrate with existing data collection, processing, and storage systems and may include a method for applying data captured from sensors deployed to monitor aspects of an industrial machine associated with at least one moving part of the machine. The data is captured with predefined lines of resolution covering a predefined frequency range and is sent to a frequency matching facility that identifies a subset of data streamed from other sensors deployed to monitor aspects of the industrial machine associated with at least one moving part of the machine. The streamed data includes a plurality of lines of resolution and frequency ranges. The subset of data identified corresponds to the lines of resolution and predefined frequency range. This method may include storing the subset of data in an electronic data record in a format that corresponds to a format of the data captured with predefined lines of resolution and signaling to a data processing facility the presence of the stored subset of data. This method may, optionally, include processing the subset of data with at least one set of algorithms, models and pattern recognizers that corresponds to algorithms, models and pattern recognizers associated with processing the data captured with predefined lines of resolution covering a predefined frequency range.

Methods and systems described herein for industrial machine sensor data streaming, collection, processing, and storage may be configured to operate and integrate with existing data collection, processing and storage systems and may include a method for identifying a subset of streamed sensor data, the sensor data captured from sensors deployed to monitor aspects of an industrial machine associated with at least one moving part of the machine, the subset of streamed sensor data at predefined lines of resolution for a predefined frequency range, and establishing a first logical route for communicating electronically between a first computing facility performing the identifying and a second computing facility, wherein identified subset of the streamed sensor data is communicated exclusively over the established first logical route when communicating the subset of streamed sensor data from the first facility to the second facility. This method may further include establishing a second logical route for communicating electronically between the first computing facility and the second computing facility for at least one portion of the streamed sensor data that is not the identified subset. Additionally, this method may further include establishing a third logical route for communicating electronically between the first computing facility and the second computing facility for at least one portion of the streamed sensor data that includes the identified subset and at least one other portion of the data not represented by the identified subset.

Methods and systems described herein for industrial machine sensor data streaming, collection, processing, and storage may be configured to operate and integrate with existing data collection, processing and storage systems and may include a first data sensing and processing system that captures first data from a first set of sensors deployed to monitor aspects of an industrial machine associated with at least one moving part of the machine, the first data covering a set of lines of resolution and a frequency range. This system may include a second data sensing and processing system that captures and streams a second set of data from a second set of sensors deployed to monitor aspects of the industrial machine associated with at least one moving part of the machine, the second data covering a plurality of lines of resolution that includes the set of lines of resolution and a plurality of frequencies that includes the frequency range. The system may enable selecting a portion of the second data that corresponds to the set of lines of resolution and the frequency range of the first data, and processing the selected portion of the second data with the first data sensing and processing system.

Methods and systems described herein for industrial machine sensor data streaming, collection, processing, and storage may be configured to operate and integrate with existing data collection, processing and storage systems and may include a method for automatically processing a portion of a stream of sensed data. The sensed data is received from a first set of sensors deployed to monitor aspects of an industrial machine associated with at least one moving part of the machine. The sensed data is in response to an electronic data structure that facilitates extracting a subset of the stream of sensed data that corresponds to a set of sensed data received from a second set of sensors deployed to monitor the aspects of the industrial machine associated with the at least one moving part of the machine. The set of sensed data is constrained to a frequency range. The stream of sensed data includes a range of frequencies that exceeds the frequency range of the set of sensed data, the processing comprising executing an algorithm on a portion of the stream of sensed data that is constrained to the frequency range of the set of sensed data, the algorithm configured to process the set of sensed data.

Methods and systems described herein for industrial machine sensor data streaming, collection, processing, and storage may be configured to operate and integrate with existing data collection, processing and storage systems and may include a method for receiving first data from sensors deployed to monitor aspects of an industrial machine associated with at least one moving part of the machine. This method may further include detecting at least one of a frequency range and lines of resolution represented by the first data; receiving a stream of data from sensors deployed to monitor the aspects of the industrial machine associated with the at least one moving part of the machine. The stream of data includes: (1) a plurality of frequency ranges and a plurality of lines of resolution that exceeds the frequency range and the lines of resolution represented by the first data; (2) a set of data extracted from the stream of data that corresponds to at least one of the frequency range and the lines of resolution represented by the first data; and (3) the extracted set of data which is processed with a data processing algorithm that is configured to process data within the frequency range and within the lines of resolution of the first data.

The present disclosure describes a system for data collection related to a chemical production process, the system according to one disclosed non-limiting embodiment of the present disclosure can include a data acquisition circuit structured to interpret a plurality of detection values, each of the plurality of detection values corresponding to input received from a detection package, the detection package including at least one of a plurality of input sensors, each of the plurality of input sensors operatively coupled to at least one of a plurality of components of the chemical production process, a data analysis circuit structured to analyze a subset of the plurality of detection values to determine at least one of a sensor state, a process state, and a component state, wherein the data analysis circuit includes a pattern recognition circuit structured to analyze the subset of the plurality of detection values using at least one of a neural net or an expert system, and an analysis response circuit structured to perform an action in response to the at least one of the sensor state, the process state, and the component state.

In embodiments, the action includes adjusting at least one process parameter based on at least the process state, and wherein the process state includes at least one process state value selected from the process state values consisting of a process stage, a process rate, a process order, an anticipated completion time of the chemical production process, an anticipated life of a component, a process event, a confidence level regarding process quality, a detection/transmission capability of a network communicating at least a portion of the detection values, an achievement of a process goal, an output production rate, an operational efficiency, an operational failure rate, a power efficiency, a power resource status, an identified risk, a temperature for at least one of a time and a location in the chemical production process, a failure prediction, an identified safety issue, an off-nominal process, and an identified maintenance requirement, and wherein the at least one process parameter includes at least one parameter selected from the parameters consisting of a temperature, an operating speed, a rate, a utilization value of a component in the chemical production process, and a process flow.

In embodiments, the action includes adjusting the detection package, wherein adjusting the detection package includes adjusting at least on parameter selected from the parameters consisting of a sensor range, a sensor scaling value, a sensor sampling frequency, a data storage sampling frequency, and a utilized sensor value, the utilized sensor value indicating which sensor from a plurality of available sensors is utilized in the detection package, and wherein the plurality of available sensors have at least one distinct sensing parameter selected from the sensing parameters consisting of input ranges, sensitivity values, locations, reliability values, duty cycle values, resolution values, and maintenance requirements.

In embodiments, the action includes adjusting an equipment package, wherein adjusting the equipment package includes changing at least one equipment value selected from the equipment values consisting of an equipment type, operating parameters for a piece of equipment, an amelioration action for an equipment issue, and a recommendation regarding future equipment.

In embodiments, the data analysis circuit is further configured to determine an alarm value in response to at least one of the subset of detection values, and wherein the analysis response circuit is further configured to continuously monitor the alarm value.

In embodiments, the action includes rebalancing process loads between components, and wherein the analysis response circuit is further structured to perform the rebalancing to achieve at least one of extend a life of one of the plurality of components, improve a probability of success of the chemical production process, and facilitate maintenance on one of the plurality of components.

In embodiments, the data analysis circuit is further structured to remove known noise from at least one of the subset of the plurality of detection values to facilitate analysis of the at least one of the subset of the plurality of detection values.

In embodiments, the data analysis circuit further includes a classification circuit structured to classify at least one of an equipment type or identity of one of the plurality of component one of the plurality of input sensors and a type or identity of a distant device, the distant device including a device that is one of operationally or environmentally coupled to the chemical production process but is not one of the plurality of components and wherein the classification circuit includes at least one of a neural net or an expert system.

In embodiments, the data analysis circuit further includes an optimization circuit structured to provide recommendations regarding at least one of a detection package, an equipment package, and a set of process parameters, and wherein the optimization circuit includes at least one of a neural net or an expert system.

In embodiments, the chemical production process is a pharmaceutical production process.

The present disclosure describes a method of data collection for a chemical production process, the method according to one disclosed non-limiting embodiment of the present disclosure can include interpreting a plurality of detection values, each of the plurality of detection values corresponding to input received a detection package, the detection package including at least one of a plurality of input sensors, each of the plurality of input sensors operatively coupled to at least one of a plurality of components of the chemical production process, analyzing a subset of the plurality of detection values to determine at least one of a sensor state, a process state, and a component state, utilizing at least one of a neural net or an expert system to perform a pattern recognition operation to analyze the subset of the plurality of detection values and performing an action in response to at least one of the sensor state, the process state, the component state, or the pattern recognition operation.

In embodiments, the action includes adjusting at least one process parameter based on at least the process state, wherein the process state includes at least one process state value selected from the process state values consisting of a process stage, a process rate, a process order, an anticipated completion time of the chemical production process, an anticipated life of a component, a process event, a confidence level regarding process quality, a detection/transmission capability of a network communicating at least a portion of the detection values, an achievement of a process goal, an output production rate, an operational efficiency, an operational failure rate, a power efficiency, a power resource status, an identified risk, a temperature for at least one of a time and a location in the chemical production process, a failure prediction, an identified safety issue, an off-nominal process, and an identified maintenance requirement and wherein the at least one process parameter includes at least one parameter selected from the parameters consisting of a temperature, an operating speed, a rate, a utilization value of a component in the chemical production process, and a process flow.

In embodiments, the action includes adjusting the detection package, wherein adjusting the detection package includes at least one operation selected from the operations consisting of adjusting a sensor range, adjusting a sensor scaling value, adjusting a sensor sampling frequency, and adjusting a utilized sensor value, the utilized sensor value indicating which sensor from a plurality of available sensors is utilized in the detection package, and wherein the plurality of available sensors have at least one distinct sensing parameter selected from the sensing parameters consisting of input ranges, sensitivity values, locations, reliability values, duty cycle values, and maintenance requirements.

In embodiments, the action includes adjusting an equipment package, wherein adjusting the equipment package includes changing an equipment type, changing operating parameters for a piece of equipment, initiate amelioration of an equipment issue, or making recommendations regarding future equipment.

In embodiments, the pattern recognition operation includes performing at least one operation selected from the operations consisting of determining a signal effectiveness of at least one of the plurality of input sensors relative to a value of interest, determining a sensitivity of at least one of the plurality of input sensors relative to a value of interest, determining a predictive confidence of at least one of the plurality of input sensors relative to a value of interest, determining a predictive delay time of at least one of the plurality of input sensors relative to a value of interest, determining a predictive accuracy of at least one of the plurality of input sensors relative to a value of interest, determining a predictive precision of at least one of the plurality of input sensors relative to a value of interest and updating the pattern recognition operation further in response to external feedback.

In embodiments, the pattern recognition operation further includes performing at least one operation selected from the operations consisting of recognizing one of the plurality of components in response to the value of interest, wherein the value of interest includes at least one of a sound signature, a heat signature, a chemical signatures, and an image and predicting a fault condition in response to the value of interest, and wherein the fault condition corresponds to at least one of one of the plurality of components or the chemical production process.

In embodiments, the method further includes updating the detection package in response to the pattern recognition operation.

The present disclosure describes an apparatus for data collection for a chemical production process, the apparatus according to one disclosed non-limiting embodiment of the present disclosure can include a data acquisition component structured to interpret a plurality of detection values, each of the plurality of detection values corresponding to input received from a detection package, the detection package including at least one of a plurality of input sensors, each of the plurality of input sensors operatively coupled to at least one of a plurality of components of the chemical production process, a data analysis component structured to analyze a subset of the plurality of detection values to determine at least one of a sensor state, a process state, and a component state, wherein the data analysis component includes a pattern recognition component structured to analyze the subset of the plurality of detection values using at least one of a neural net or an expert system and an analysis response component structured to perform an action in response to the at least one of the sensor state, the process state or the component state, wherein the action includes at least one operation selected from the operations consisting of adjusting a process parameter, adjusting the detection package, adjusting an equipment package, and rebalancing process loads.

In embodiments, the action includes rebalancing process loads, and wherein rebalancing process loads further includes rebalancing the process loads between the components to achieve at least one of extending a life of one of the plurality of components, improving a probability of success of the chemical production process, and facilitating maintenance on one of the plurality of components.

In embodiments, the action includes the facilitating maintenance on one of the plurality of components, and wherein the facilitating maintenance further includes facilitating maintenance to achieve at least one of extending a maintenance interval of one of the plurality of components, synchronizing a first maintenance interval of a first one of the plurality of components with a second maintenance interval of a second one of the plurality of components, differentiating a first maintenance interval of a first one of the plurality of components from a second maintenance interval of a second one of the plurality of components and aligning a maintenance interval of one of the plurality of components with an external reference time, the external reference time including at least one of a planned shutdown time for the chemical production process, a time that is past an expected completion time of the chemical production process, and a scheduled maintenance time for the one of the plurality of components.

Methods and systems are disclosed herein for continuous ultrasonic monitoring, including providing continuous ultrasonic monitoring of rotating elements and bearings of an energy production facility; for cloud-based systems including machine pattern recognition based on the fusion of remote, analog industrial sensors or machine pattern analysis of state information from multiple analog industrial sensors to provide anticipated state information for an industrial system; for on-device sensor fusion and data storage for industrial IoT devices, including on-device sensor fusion and data storage for an Industrial IoT device, where data from multiple sensors are multiplexed at the device for storage of a fused data stream; and for self-organizing systems including a self-organizing data marketplace for industrial IoT data, including a self-organizing data marketplace for industrial IoT data, where available data elements are organized in the marketplace for consumption by consumers based on training a self-organizing facility with a training set and feedback from measures of marketplace success, for self-organizing data pools, including self-organization of data pools based on utilization and/or yield metrics, including utilization and/or yield metrics that are tracked for a plurality of data pools, a self-organized swarm of industrial data collectors, including a self-organizing swarm of industrial data collectors that organize among themselves to optimize data collection based on the capabilities and conditions of the members of the swarm, a self-organizing collector, including a self-organizing, multi-sensor data collector that can optimize data collection, power and/or yield based on conditions in its environment, a self-organizing storage for a multi-sensor data collector, including self-organizing storage for a multi-sensor data collector for industrial sensor data, a self-organizing network coding for a multi-sensor data network, including self-organizing network coding for a data network that transports data from multiple sensors in an industrial data collection environment.

Methods and systems are disclosed herein for training artificial intelligence ("AI") models based on industry-specific feedback, including training an AI model based on industry-specific feedback that reflects a measure of utilization, yield, or impact, where the AI model operates on sensor data from an industrial environment; for an industrial IoT distributed ledger, including a distributed ledger supporting the tracking of transactions executed in an automated data marketplace for industrial IoT data; for a network-sensitive collector, including a network condition-sensitive, self-organizing, multi-sensor data collector that can optimize based on bandwidth, quality of service, pricing, and/or other network conditions; for a remotely organized universal data collector that can power up and down sensor interfaces based on need and/or conditions identified in an industrial data collection environment; and for a haptic or multi-sensory user interface, including a wearable haptic or multi-sensory user interface for an industrial sensor data collector, with vibration, heat, electrical, and/or sound outputs.

Methods and systems are disclosed herein for a presentation layer for augmented reality and virtual reality (AR/VR) industrial glasses, where heat map elements are presented based on patterns and/or parameters in collected data; and for condition-sensitive, self-organized tuning of AR/VR interfaces based on feedback metrics and/or training in industrial environments.

In embodiments, a system for data collection, processing, and utilization of signals from at least a first element in a first machine in an industrial environment includes a platform including a computing environment connected to a local data collection system having at least a first sensor signal and a second sensor signal obtained from at least the first machine in the industrial environment. The system includes a first sensor in the local data collection system configured to be connected to the first machine and a second sensor in the local data collection system. The system further includes a cross-point switch in the local data collection system having multiple inputs and multiple outputs including a first input connected to the first sensor and a second input connected to the second sensor. Throughout the present disclosure, wherever a crosspoint switch, multiplexer (MUX) device, or other multiple-input multiple-output data collection or communication device is described, any multi-sensor acquisition device is also contemplated herein. In certain embodiments, a multi-sensor acquisition device includes one or more channels configured for, or compatible with, an analog sensor input. The multiple outputs include a first output and second output configured to be switchable between a condition in which the first output is configured to switch between delivery of the first sensor signal and the second sensor signal and a condition in which there is simultaneous delivery of the first sensor signal from the first output and the second sensor signal from the second output. Each of multiple inputs is configured to be individually assigned to any of the multiple outputs, or combined in any subsets of the inputs to the outputs. Unassigned outputs are configured to be switched off, for example by producing a high-impedance state.

In embodiments, the first sensor signal and the second sensor signal are continuous vibration data about the industrial environment. In embodiments, the second sensor in the local data collection system is configured to be connected to the first machine. In embodiments, the second sensor in the local data collection system is configured to be connected to a second machine in the industrial environment. In embodiments, the computing environment of the platform is configured to compare relative phases of the first and second sensor signals. In embodiments, the first sensor is a single-axis sensor and the second sensor is a three-axis sensor. In embodiments, at least one of the multiple inputs of the crosspoint switch includes internet protocol, front-end signal conditioning, for improved signal-to-noise ratio. In embodiments, the crosspoint switch includes a third input that is configured with a continuously monitored alarm having a pre-determined trigger condition when the third input is unassigned to or undetected at any of the multiple outputs.

In embodiments, the local data collection system includes multiple multiplexing units and multiple data acquisition units receiving multiple data streams from multiple machines in the industrial environment. In embodiments, the local data collection system includes distributed complex programmable hardware device ("CPLD") chips each dedicated to a data bus for logic control of the multiple multiplexing units and the multiple data acquisition units that receive the multiple data streams from the multiple machines in the industrial environment. In embodiments, the local data collection system is configured to provide high-amperage input capability using solid state relays. In embodiments, the local data collection system is configured to power-down at least one of an analog sensor channel and a component board.

In embodiments, the local data collection system includes a phase-lock loop band-pass tracking filter configured to obtain slow-speed revolutions per minute ("RPMs") and phase information. In embodiments, the local data collection system is configured to digitally derive phase using on-board timers relative to at least one trigger channel and at least one of the multiple inputs. In embodiments, the local data collection system includes a peak-detector configured to autoscale using a separate analog-to-digital converter for peak detection. In embodiments, the local data collection system is configured to route at least one trigger channel that is raw and buffered into at least one of the multiple inputs. In embodiments, the local data collection system includes at least one delta-sigma analog-to-digital converter that is configured to increase input oversampling rates to reduce sampling rate outputs and to minimize anti-aliasing filter requirements. In embodiments, the distributed CPLD chips each dedicated to the data bus for logic control of the multiple multiplexing units and the multiple data acquisition units includes as high-frequency crystal clock reference configured to be divided by at least one of the distributed CPLD chips for at least one delta-sigma analog-to-digital converter to achieve lower sampling rates without digital resampling.

In embodiments, the local data collection system is configured to obtain long blocks of data at a single relatively high-sampling rate as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units each having an onboard card set configured to store calibration information and maintenance history of a data acquisition unit in which the onboard card set is located. In embodiments, the local data collection system is configured to plan data acquisition routes based on hierarchical templates.

In embodiments, the local data collection system is configured to manage data collection bands. In embodiments, the data collection bands define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system is configured to create data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the local data collection system includes a graphical user interface ("GUI") system configured to manage the data collection bands. In embodiments, the GUI system includes an expert system diagnostic tool. In embodiments, the platform includes cloud-based, machine pattern analysis of state information from multiple sensors to provide anticipated state information for the industrial environment. In embodiments, the platform is configured to provide self-organization of data pools based on at least one of the utilization metrics and yield metrics. In embodiments, the platform includes a self-organized swarm of industrial data collectors. In embodiments, the local data collection system includes a wearable haptic user interface for an industrial sensor data collector with at least one of vibration, heat, electrical, and sound outputs.

In embodiments, multiple inputs of the crosspoint switch include a third input connected to the second sensor and a fourth input connected to the second sensor. The first sensor signal is from a single-axis sensor at an unchanging location associated with the first machine. In embodiments, the second sensor is a three-axis sensor. In embodiments, the local data collection system is configured to record gap-free digital waveform data simultaneously from at least the first input, the second input, the third input, and the fourth input. In embodiments, the platform is configured to determine a change in relative phase based on the simultaneously recorded gap-free digital waveform data. In embodiments, the second sensor is configured to be movable to a plurality of positions associated with the first machine while obtaining the simultaneously recorded gap-free digital waveform data. In embodiments, multiple outputs of the crosspoint switch include a third output and fourth output. The second, third, and fourth outputs are assigned together to a sequence of tri-axial sensors each located at different positions associated with the machine. In embodiments, the platform is configured to determine an operating deflection shape based on the change in relative phase and the simultaneously recorded gap-free digital waveform data.

In embodiments, the unchanging location is a position associated with the rotating shaft of the first machine. In embodiments, tri-axial sensors in the sequence of the tri-axial sensors are each located at different positions on the first machine but are each associated with different bearings in the machine. In embodiments, tri-axial sensors in the sequence of the tri-axial sensors are each located at similar positions associated with similar bearings but are each associated with different machines. In embodiments, the local data collection system is configured to obtain the simultaneously recorded gap-free digital waveform data from the first machine while the first machine and a second machine are both in operation. In embodiments, the local data collection system is configured to characterize a contribution from the first machine and the second machine in the simultaneously recorded gap-free digital waveform data from the first machine. In embodiments, the simultaneously recorded gap-free digital waveform data has a duration that is in excess of one minute.

In embodiments, a method of monitoring a machine having at least one shaft supported by a set of bearings includes monitoring a first data channel assigned to a single-axis sensor at an unchanging location associated with the machine. The method includes monitoring second, third, and fourth data channels each assigned to an axis of a three-axis sensor. The method includes recording gap-free digital waveform data simultaneously from all of the data channels while the machine is in operation and determining a change in relative phase based on the digital waveform data.

In embodiments, the tri-axial sensor is located at a plurality of positions associated with the machine while obtaining the digital waveform. In embodiments, the second, third, and fourth channels are assigned together to a sequence of tri-axial sensors each located at different positions associated with the machine. In embodiments, the data is received from all of the sensors simultaneously. In embodiments, the method includes determining an operating deflection shape based on the change in relative phase information and the waveform data. In embodiments, the unchanging location is a position associated with the shaft of the machine. In embodiments, the tri-axial sensors in the sequence of the tri-axial sensors are each located at different positions and are each associated with different bearings in the machine. In embodiments, the unchanging location is a position associated with the shaft of the machine. The tri-axial sensors in the sequence of the tri-axial sensors are each located at different positions and are each associated with different bearings that support the shaft in the machine.

In embodiments, the method includes monitoring the first data channel assigned to the single-axis sensor at an unchanging location located on a second machine. The method includes monitoring the second, the third, and the fourth data channels, each assigned to the axis of a three-axis sensor that is located at the position associated with the second machine. The method also includes recording gap-free digital waveform data simultaneously from all of the data channels from the second machine while both of the machines are in operation. In embodiments, the method includes characterizing the contribution from each of the machines in the gap-free digital waveform data simultaneously from the second machine.

In embodiments, a method for data collection, processing, and utilization of signals with a platform monitoring at least a first element in a first machine in an industrial environment includes obtaining, automatically with a computing environment, at least a first sensor signal and a second sensor signal with a local data collection system that monitors at least the first machine. The method includes connecting a first input of a crosspoint switch of the local data collection system to a first sensor and a second input of the crosspoint switch to a second sensor in the local data collection system. The method includes switching between a condition in which a first output of the crosspoint switch alternates between delivery of at least the first sensor signal and the second sensor signal and a condition in which there is simultaneous delivery of the first sensor signal from the first output and the second sensor signal from a second output of the crosspoint switch. The method also includes switching off unassigned outputs of the crosspoint switch into a high-impedance state.

In embodiments, the first sensor signal and the second sensor signal are continuous vibration data from the industrial environment. In embodiments, the second sensor in the local data collection system is connected to the first machine. In embodiments, the second sensor in the local data collection system is connected to a second machine in the industrial environment. In embodiments, the method includes comparing, automatically with the computing environment, relative phases of the first and second sensor signals. In embodiments, the first sensor is a single-axis sensor and the second sensor is a three-axis sensor. In embodiments, at least the first input of the crosspoint switch includes internet protocol front-end signal conditioning for improved signal-to-noise ratio.

In embodiments, the method includes continuously monitoring at least a third input of the crosspoint switch with an alarm having a pre-determined trigger condition when the third input is unassigned to any of multiple outputs on the crosspoint switch. In embodiments, the local data collection system includes multiple multiplexing units and multiple data acquisition units receiving multiple data streams from multiple machines in the industrial environment. In embodiments, the local data collection system includes distributed CPLD chips each dedicated to a data bus for logic control of the multiple multiplexing units and the multiple data acquisition units that receive the multiple data streams from the multiple machines in the industrial environment. In embodiments, the local data collection system provides high-amperage input capability using solid state relays.

In embodiments, the method includes powering down at least one of an analog sensor channel and a component board of the local data collection system. In embodiments, the local data collection system includes an external voltage reference for an A/D zero reference that is independent of the voltage of the first sensor and the second sensor. In embodiments, the local data collection system includes a phase-lock loop band-pass tracking filter that obtains slow-speed RPMs and phase information. In embodiments, the method includes digitally deriving phase using on-board timers relative to at least one trigger channel and at least one of multiple inputs on the crosspoint switch.

In embodiments, the method includes auto-scaling with a peak-detector using a separate analog-to-digital converter for peak detection. In embodiments, the method includes routing at least one trigger channel that is raw and buffered into at least one of multiple inputs on the crosspoint switch. In embodiments, the method includes increasing input oversampling rates with at least one delta-sigma analog-to-digital converter to reduce sampling rate outputs and to minimize anti-aliasing filter requirements. In embodiments, the distributed CPLD chips are each dedicated to the data bus for logic control of the multiple multiplexing units and the multiple data acquisition units and each include a high-frequency crystal clock reference divided by at least one of the distributed CPLD chips for at least one delta-sigma analog-to-digital converter to achieve lower sampling rates without digital resampling. In embodiments, the method includes obtaining long blocks of data at a single relatively high-sampling rate with the local data collection system as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units and each data acquisition unit has an onboard card set that stores calibration information and maintenance history of a data acquisition unit in which the onboard card set is located.

In embodiments, the method includes planning data acquisition routes based on hierarchical templates associated with at least the first element in the first machine in the industrial environment. In embodiments, the local data collection system manages data collection bands that define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system creates data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the method includes controlling a GUI system of the local data collection system to manage the data collection bands. The GUI system includes an expert system diagnostic tool. In embodiments, the computing environment of the platform includes cloud-based, machine pattern analysis of state information from multiple sensors to provide anticipated state information for the industrial environment. In embodiments, the computing environment of the platform provides self-organization of data pools based on at least one of the utilization metrics and yield metrics. In embodiments, the computing environment of the platform includes a self-organized swarm of industrial data collectors. In embodiments, each of multiple inputs of the crosspoint switch is individually assignable to any of multiple outputs of the crosspoint switch.

Methods and systems described herein for industrial machine sensor data streaming, collection, processing, and storage may be configured to operate and integrate with existing data collection, processing and storage systems and may include a method for capturing a plurality of streams of sensed data from sensors deployed to monitor aspects of an industrial machine associated with at least one moving part of the machine; at least one of the streams contains a plurality of frequencies of data. The method may include identifying a subset of data in at least one of the plurality of streams that corresponds to data representing at least one predefined frequency. The at least one predefined frequency is represented by a set of data collected from alternate sensors deployed to monitor aspects of the industrial machine associated with the at least one moving part of the machine. The method may further include processing the identified data with a data processing facility that processes the identified data with an algorithm configured to be applied to the set of data collected from alternate sensors. Lastly, the method may include storing the at least one of the streams of data, the identified subset of data, and a result of processing the identified data in an electronic data set.

Methods and systems described herein for industrial machine sensor data streaming, collection, processing, and storage may be configured to operate and integrate with existing data collection, processing, and storage systems and may include a method for applying data captured from sensors deployed to monitor aspects of an industrial machine associated with at least one moving part of the machine. The data is captured with predefined lines of resolution covering a predefined frequency range and is sent to a frequency matching facility that identifies a subset of data streamed from other sensors deployed to monitor aspects of the industrial machine associated with at least one moving part of the machine. The streamed data includes a plurality of lines of resolution and frequency ranges. The subset of data identified corresponds to the lines of resolution and predefined frequency range. This method may include storing the subset of data in an electronic data record in a format that corresponds to a format of the data captured with predefined lines of resolution and signaling to a data processing facility the presence of the stored subset of data. This method may, optionally, include processing the subset of data with at least one set of algorithms, models and pattern recognizers that corresponds to algorithms, models and pattern recognizers associated with processing the data captured with predefined lines of resolution covering a predefined frequency range.

Methods and systems described herein for industrial machine sensor data streaming, collection, processing, and storage may be configured to operate and integrate with existing data collection, processing and storage systems and may include a method for identifying a subset of streamed sensor data, the sensor data captured from sensors deployed to monitor aspects of an industrial machine associated with at least one moving part of the machine, the subset of streamed sensor data at predefined lines of resolution for a predefined frequency range, and establishing a first logical route for communicating electronically between a first computing facility performing the identifying and a second computing facility, wherein identified subset of the streamed sensor data is communicated exclusively over the established first logical route when communicating the subset of streamed sensor data from the first facility to the second facility. This method may further include establishing a second logical route for communicating electronically between the first computing facility and the second computing facility for at least one portion of the streamed sensor data that is not the identified subset. Additionally, this method may further include establishing a third logical route for communicating electronically between the first computing facility and the second computing facility for at least one portion of the streamed sensor data that includes the identified subset and at least one other portion of the data not represented by the identified subset.

Methods and systems described herein for industrial machine sensor data streaming, collection, processing, and storage may be configured to operate and integrate with existing data collection, processing and storage systems and may include a first data sensing and processing system that captures first data from a first set of sensors deployed to monitor aspects of an industrial machine associated with at least one moving part of the machine, the first data covering a set of lines of resolution and a frequency range. This system may include a second data sensing and processing system that captures and streams a second set of data from a second set of sensors deployed to monitor aspects of the industrial machine associated with at least one moving part of the machine, the second data covering a plurality of lines of resolution that includes the set of lines of resolution and a plurality of frequencies that includes the frequency range. The system may enable selecting a portion of the second data that corresponds to the set of lines of resolution and the frequency range of the first data, and processing the selected portion of the second data with the first data sensing and processing system.

Methods and systems described herein for industrial machine sensor data streaming, collection, processing, and storage may be configured to operate and integrate with existing data collection, processing and storage systems and may include a method for automatically processing a portion of a stream of sensed data. The sensed data is received from a first set of sensors deployed to monitor aspects of an industrial machine associated with at least one moving part of the machine. The sensed data is in response to an electronic data structure that facilitates extracting a subset of the stream of sensed data that corresponds to a set of sensed data received from a second set of sensors deployed to monitor the aspects of the industrial machine associated with the at least one moving part of the machine. The set of sensed data is constrained to a frequency range. The stream of sensed data includes a range of frequencies that exceeds the frequency range of the set of sensed data, the processing comprising executing an algorithm on a portion of the stream of sensed data that is constrained to the frequency range of the set of sensed data, the algorithm configured to process the set of sensed data.

Methods and systems described herein for industrial machine sensor data streaming, collection, processing, and storage may be configured to operate and integrate with existing data collection, processing and storage systems and may include a method for receiving first data from sensors deployed to monitor aspects of an industrial machine associated with at least one moving part of the machine. This method may further include detecting at least one of a frequency range and lines of resolution represented by the first data; receiving a stream of data from sensors deployed to monitor the aspects of the industrial machine associated with the at least one moving part of the machine. The stream of data includes: (1) a plurality of frequency ranges and a plurality of lines of resolution that exceeds the frequency range and the lines of resolution represented by the first data; (2) a set of data extracted from the stream of data that corresponds to at least one of the frequency range and the lines of resolution represented by the first data; and (3) the extracted set of data which is processed with a data processing algorithm that is configured to process data within the frequency range and within the lines of resolution of the first data.

In embodiments, a monitoring system for data collection in a mining environment may comprise: a data storage structured to store at least one collector route and at least one sensor specification, wherein each sensor specification corresponds to at least one of a plurality of input channels, and wherein the at least one collector route comprises a corresponding sensor collection routine; a data collector communicatively coupled to the plurality of input channels, and providing a plurality of detection values from the plurality of input channels in response to a selected one of each of the at least one sensor collection routine and the at least one sensor specification; a data acquisition circuit structured to interpret the plurality of detection values from the data collector; a data analysis circuit structured to: analyze at least one of: the plurality of detection values; and a second plurality of detection values, wherein each of the second plurality of detection values correspond to one of the plurality of input channels; and determine a data collection quality parameter by evaluating at least one of: the selected at least one sensor collection routine and the selected sensor specification; and an analysis response circuit structured to adjust at least one of: the selected sensor collection routine and the selected sensor specification, in response to the data collection quality parameter. In embodiments, the data collection quality parameter may comprise a network parameter comprising at least one of a bandwidth or a quality of service. The analysis response circuit may be sensitive to a change to the data collection quality parameter due to a quality of an environmental condition. The environmental condition may comprise at least one of: the data collector, the data storage, the data acquisition circuit, or the data analysis circuit, being in an environment that blocks communication. The plurality of input channels may comprise a first input connected to a corresponding first sensor, and a second input connected to a corresponding second sensor, where the first input and second input are switchable between a plurality of output channels comprising a first output and a second output in a multiplexed many inputs to many outputs configuration. At least one of the first input and the second input may be selectively operable between a first condition comprising a low impedance state wherein communication passes therethrough, and a second condition comprising a high impedance state wherein communication is prevented therethrough. The data storage may be structured as a distributed data storage. The analysis response circuit may be further structured to adjust the selected collection routine to store at least a portion of the plurality of detection values in the distributed data storage when the data collection quality parameter indicates a network infrastructure bandwidth is limited. A data storage profile may comprise a data communication path for the plurality of detection values through a network infrastructure, and wherein the data storage is disposed on the data communication path. The analysis response circuit may be further configured to update the data storage profile in response to the data collection quality parameter. The data collector may combine the data from at least two of the plurality of input channels into a single fused output data stream. The analysis response circuit may be further structured to provide a network coding value in response to the data collection quality parameter, and wherein the data collector and the data acquisition circuit are responsive to the network coding value. The network coding value may comprise at least one value selected from the values consisting of: network encoding for data transmission, packet sizing, packet distribution, combinations of detection values from a plurality of the input channels within packets, and encoding and decoding algorithms for network data and communications. The analysis response circuit may be further structured to adjust the at least one sensor specification in response to the data collection quality parameter, wherein the adjusting the at least one sensor specification comprises adjusting at least one parameter selected from the parameters consisting of: a sensor range; a sensor scaling value; a sensor sampling frequency; a data storage sampling frequency; and a utilized input channel value, the utilized input channel value indicating which input channel from the plurality of input channels is communicatively coupled to the data collector, and wherein the plurality of available input channels have at least one distinct sensing parameter selected from the sensing parameters consisting of: input ranges, sensitivity values, locations, reliability values, duty cycle values, resolution values, and maintenance requirements. The data storage further may store a distributed ledger comprising at least a portion of the plurality of detection values.

In embodiments A computer-implemented method for monitoring data collection in a mining environment may comprise: accessing at least one stored collector route and at least one stored sensor specification, wherein each sensor specification corresponds to at least one of a plurality of input channels, and wherein the at least one collector route comprises a corresponding sensor collection routine; communicating with the plurality of input channels in response to a selected one of each of the at least one stored sensor collection routine and the at least one stored sensor specification, and providing a plurality of detection values from the plurality of input channels; interpreting the plurality of detection values with a data acquisition circuit; analyzing at least one of: the plurality of detection values; and a second plurality of detection values, wherein each of the second plurality of detection values correspond to one of the plurality of input channels; determining a data collection quality parameter by evaluating at least one of the selected sensor collection routine and the selected sensor specification; and adjusting at least one of the selected sensor collection routine and the selected sensor specification in response to the data collection quality parameter. In embodiments, the data collection quality parameter may comprise a network parameter comprising at least one of a bandwidth or a quality of service due to a quality of an environmental condition; the selected sensor collection routine comprises a data communication path between at least one of the plurality of input channels and a storage destination for one of the detection values corresponding to the at least one of the plurality of input channels; the environmental condition comprises a radio-frequency (RF) shielded environment blocking at least one communication segment of the data communication path; and wherein the method further comprises adjusting the selected sensor collection routine in response to the blocked at least one communication segment. Adjusting the selected sensor collection routine may further comprise at least one operation selected from the operations consisting of: adjusting a data storage profile comprising the data communication path for the plurality of detection values in a distributed data storage to store data in a second storage destination until the blocked at least one communication segment is restored; and adjusting the data storage profile to a second data communication path for the plurality of detection values, the second data communication path comprising an alternate network routing to reach the storage destination.

In embodiments, a monitoring apparatus for data collection in a mining environment may comprise: a data storage component configured to store at least one collector route and at least one sensor specification, wherein each sensor specification corresponds to at least one of a plurality of input channels, and wherein the at least one collector route comprises a corresponding sensor collection routine; a data collector component communicatively coupled to the plurality of input channels, and configured to provide a plurality of detection values from the plurality of input channels in response to a selected one of each of the sensor collection routine and the at least one sensor specification; a data acquisition component configured to interpret the plurality of detection values from the data collector component; a data analysis component configured to analyze the plurality of detection values, and to determine a data collection quality parameter by evaluating at least one of the selected sensor collection routine and the selected sensor specification; and an analysis response component configured to adjust at least one of the selected sensor collection routine and the selected sensor specification in response to the data collection quality parameter. In embodiments, the at least one collector route may further comprise a plurality of collector routes, each of the plurality of collector routes corresponding to one of a plurality of collector route templates, and wherein each of the collector route templates comprises a corresponding sensor collection routine; wherein the data collector communicates with the plurality of input channels in response to the sensor collection routine corresponding to the selected one of the collector route templates; and wherein the analysis response circuit is further structured to adjust the selected one of the collector route templates by switching to a different one of the collector route templates.

Methods and systems are disclosed herein for continuous ultrasonic monitoring, including providing continuous ultrasonic monitoring of rotating elements and bearings of an energy production facility; for cloud-based systems including machine pattern recognition based on the fusion of remote, analog industrial sensors or machine pattern analysis of state information from multiple analog industrial sensors to provide anticipated state information for an industrial system; for on-device sensor fusion and data storage for industrial IoT devices, including on-device sensor fusion and data storage for an Industrial IoT device, where data from multiple sensors are multiplexed at the device for storage of a fused data stream; and for self-organizing systems including a self-organizing data marketplace for industrial IoT data, including a self-organizing data marketplace for industrial IoT data, where available data elements are organized in the marketplace for consumption by consumers based on training a self-organizing facility with a training set and feedback from measures of marketplace success, for self-organizing data pools, including self-organization of data pools based on utilization and/or yield metrics, including utilization and/or yield metrics that are tracked for a plurality of data pools, a self-organized swarm of industrial data collectors, including a self-organizing swarm of industrial data collectors that organize among themselves to optimize data collection based on the capabilities and conditions of the members of the swarm, a self-organizing collector, including a self-organizing, multi-sensor data collector that can optimize data collection, power and/or yield based on conditions in its environment, a self-organizing storage for a multi-sensor data collector, including self-organizing storage for a multi-sensor data collector for industrial sensor data, a self-organizing network coding for a multi-sensor data network, including self-organizing network coding for a data network that transports data from multiple sensors in an industrial data collection environment.

Methods and systems are disclosed herein for training artificial intelligence ("AI") models based on industry-specific feedback, including training an AI model based on industry-specific feedback that reflects a measure of utilization, yield, or impact, where the AI model operates on sensor data from an industrial environment; for an industrial IoT distributed ledger, including a distributed ledger supporting the tracking of transactions executed in an automated data marketplace for industrial IoT data; for a network-sensitive collector, including a network condition-sensitive, self-organizing, multi-sensor data collector that can optimize based on bandwidth, quality of service, pricing, and/or other network conditions; for a remotely organized universal data collector that can power up and down sensor interfaces based on need and/or conditions identified in an industrial data collection environment; and for a haptic or multi-sensory user interface, including a wearable haptic or multi-sensory user interface for an industrial sensor data collector, with vibration, heat, electrical, and/or sound outputs.

Methods and systems are disclosed herein for a presentation layer for augmented reality and virtual reality (AR/VR) industrial glasses, where heat map elements are presented based on patterns and/or parameters in collected data; and for condition-sensitive, self-organized tuning of AR/VR interfaces based on feedback metrics and/or training in industrial environments.

In embodiments, a system for data collection, processing, and utilization of signals from at least a first element in a first machine in an industrial environment includes a platform including a computing environment connected to a local data collection system having at least a first sensor signal and a second sensor signal obtained from at least the first machine in the industrial environment. The system includes a first sensor in the local data collection system configured to be connected to the first machine and a second sensor in the local data collection system. The system further includes a crosspoint switch in the local data collection system having multiple inputs and multiple outputs including a first input connected to the first sensor and a second input connected to the second sensor. Throughout the present disclosure, wherever a crosspoint switch, multiplexer (MUX) device, or other multiple-input multiple-output data collection or communication device is described, any multi-sensor acquisition device is also contemplated herein. In certain embodiments, a multi-sensor acquisition device includes one or more channels configured for, or compatible with, an analog sensor input. The multiple outputs include a first output and second output configured to be switchable between a condition in which the first output is configured to switch between delivery of the first sensor signal and the second sensor signal and a condition in which there is simultaneous delivery of the first sensor signal from the first output and the second sensor signal from the second output. Each of multiple inputs is configured to be individually assigned to any of the multiple outputs, or combined in any subsets of the inputs to the outputs. Unassigned outputs are configured to be switched off, for example by producing a high-impedance state.

In embodiments, the first sensor signal and the second sensor signal are continuous vibration data about the industrial environment. In embodiments, the second sensor in the local data collection system is configured to be connected to the first machine. In embodiments, the second sensor in the local data collection system is configured to be connected to a second machine in the industrial environment. In embodiments, the computing environment of the platform is configured to compare relative phases of the first and second sensor signals. In embodiments, the first sensor is a single-axis sensor and the second sensor is a three-axis sensor. In embodiments, at least one of the multiple inputs of the crosspoint switch includes internet protocol, front-end signal conditioning, for improved signal-to-noise ratio. In embodiments, the crosspoint switch includes a third input that is configured with a continuously monitored alarm having a pre-determined trigger condition when the third input is unassigned to or undetected at any of the multiple outputs.

In embodiments, the local data collection system includes multiple multiplexing units and multiple data acquisition units receiving multiple data streams from multiple machines in the industrial environment. In embodiments, the local data collection system includes distributed complex programmable hardware device ("CPLD") chips each dedicated to a data bus for logic control of the multiple multiplexing units and the multiple data acquisition units that receive the multiple data streams from the multiple machines in the industrial environment. In embodiments, the local data collection system is configured to provide high-amperage input capability using solid state relays. In embodiments, the local data collection system is configured to power-down at least one of an analog sensor channel and a component board.

In embodiments, the local data collection system includes a phase-lock loop band-pass tracking filter configured to obtain slow-speed revolutions per minute ("RPMs") and phase information. In embodiments, the local data collection system is configured to digitally derive phase using on-board timers relative to at least one trigger channel and at least one of the multiple inputs. In embodiments, the local data collection system includes a peak-detector configured to autoscale using a separate analog-to-digital converter for peak detection. In embodiments, the local data collection system is configured to route at least one trigger channel that is raw and buffered into at least one of the multiple inputs. In embodiments, the local data collection system includes at least one delta-sigma analog-to-digital converter that is configured to increase input oversampling rates to reduce sampling rate outputs and to minimize anti-aliasing filter requirements. In embodiments, the distributed CPLD chips each dedicated to the data bus for logic control of the multiple multiplexing units and the multiple data acquisition units includes as high-frequency crystal clock reference configured to be divided by at least one of the distributed CPLD chips for at least one delta-sigma analog-to-digital converter to achieve lower sampling rates without digital resampling.

In embodiments, the local data collection system is configured to obtain long blocks of data at a single relatively high-sampling rate as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units each having an onboard card set configured to store calibration information and maintenance history of a data acquisition unit in which the onboard card set is located. In embodiments, the local data collection system is configured to plan data acquisition routes based on hierarchical templates.

In embodiments, the local data collection system is configured to manage data collection bands. In embodiments, the data collection bands define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system is configured to create data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the local data collection system includes a graphical user interface ("GUI") system configured to manage the data collection bands. In embodiments, the GUI system includes an expert system diagnostic tool. In embodiments, the platform includes cloud-based, machine pattern analysis of state information from multiple sensors to provide anticipated state information for the industrial environment. In embodiments, the platform is configured to provide self-organization of data pools based on at least one of the utilization metrics and yield metrics. In embodiments, the platform includes a self-organized swarm of industrial data collectors. In embodiments, the local data collection system includes a wearable haptic user interface for an industrial sensor data collector with at least one of vibration, heat, electrical, and sound outputs.

In embodiments, multiple inputs of the crosspoint switch include a third input connected to the second sensor and a fourth input connected to the second sensor. The first sensor signal is from a single-axis sensor at an unchanging location associated with the first machine. In embodiments, the second sensor is a three-axis sensor. In embodiments, the local data collection system is configured to record gap-free digital waveform data simultaneously from at least the first input, the second input, the third input, and the fourth input. In embodiments, the platform is configured to determine a change in relative phase based on the simultaneously recorded gap-free digital waveform data. In embodiments, the second sensor is configured to be movable to a plurality of positions associated with the first machine while obtaining the simultaneously recorded gap-free digital waveform data. In embodiments, multiple outputs of the crosspoint switch include a third output and fourth output. The second, third, and fourth outputs are assigned together to a sequence of tri-axial sensors each located at different positions associated with the machine. In embodiments, the platform is configured to determine an operating deflection shape based on the change in relative phase and the simultaneously recorded gap-free digital waveform data.

In embodiments, the unchanging location is a position associated with the rotating shaft of the first machine. In embodiments, tri-axial sensors in the sequence of the tri-axial sensors are each located at different positions on the first machine but are each associated with different bearings in the machine. In embodiments, tri-axial sensors in the sequence of the tri-axial sensors are each located at similar positions associated with similar bearings but are each associated with different machines. In embodiments, the local data collection system is configured to obtain the simultaneously recorded gap-free digital waveform data from the first machine while the first machine and a second machine are both in operation. In embodiments, the local data collection system is configured to characterize a contribution from the first machine and the second machine in the simultaneously recorded gap-free digital waveform data from the first machine. In embodiments, the simultaneously recorded gap-free digital waveform data has a duration that is in excess of one minute.

In embodiments, a method of monitoring a machine having at least one shaft supported by a set of bearings includes monitoring a first data channel assigned to a single-axis sensor at an unchanging location associated with the machine. The method includes monitoring second, third, and fourth data channels each assigned to an axis of a three-axis sensor. The method includes recording gap-free digital waveform data simultaneously from all of the data channels while the machine is in operation and determining a change in relative phase based on the digital waveform data.

In embodiments, the tri-axial sensor is located at a plurality of positions associated with the machine while obtaining the digital waveform. In embodiments, the second, third, and fourth channels are assigned together to a sequence of tri-axial sensors each located at different positions associated with the machine. In embodiments, the data is received from all of the sensors simultaneously. In embodiments, the method includes determining an operating deflection shape based on the change in relative phase information and the waveform data. In embodiments, the unchanging location is a position associated with the shaft of the machine. In embodiments, the tri-axial sensors in the sequence of the tri-axial sensors are each located at different positions and are each associated with different bearings in the machine. In embodiments, the unchanging location is a position associated with the shaft of the machine. The tri-axial sensors in the sequence of the tri-axial sensors are each located at different positions and are each associated with different bearings that support the shaft in the machine.

In embodiments, the method includes monitoring the first data channel assigned to the single-axis sensor at an unchanging location located on a second machine. The method includes monitoring the second, the third, and the fourth data channels, each assigned to the axis of a three-axis sensor that is located at the position associated with the second machine. The method also includes recording gap-free digital waveform data simultaneously from all of the data channels from the second machine while both of the machines are in operation. In embodiments, the method includes characterizing the contribution from each of the machines in the gap-free digital waveform data simultaneously from the second machine.

In embodiments, a method for data collection, processing, and utilization of signals with a platform monitoring at least a first element in a first machine in an industrial environment includes obtaining, automatically with a computing environment, at least a first sensor signal and a second sensor signal with a local data collection system that monitors at least the first machine. The method includes connecting a first input of a crosspoint switch of the local data collection system to a first sensor and a second input of the crosspoint switch to a second sensor in the local data collection system. The method includes switching between a condition in which a first output of the crosspoint switch alternates between delivery of at least the first sensor signal and the second sensor signal and a condition in which there is simultaneous delivery of the first sensor signal from the first output and the second sensor signal from a second output of the crosspoint switch. The method also includes switching off unassigned outputs of the crosspoint switch into a high-impedance state.

In embodiments, the first sensor signal and the second sensor signal are continuous vibration data from the industrial environment. In embodiments, the second sensor in the local data collection system is connected to the first machine. In embodiments, the second sensor in the local data collection system is connected to a second machine in the industrial environment. In embodiments, the method includes comparing, automatically with the computing environment, relative phases of the first and second sensor signals. In embodiments, the first sensor is a single-axis sensor and the second sensor is a three-axis sensor. In embodiments, at least the first input of the crosspoint switch includes internet protocol front-end signal conditioning for improved signal-to-noise ratio.

In embodiments, the method includes continuously monitoring at least a third input of the crosspoint switch with an alarm having a pre-determined trigger condition when the third input is unassigned to any of multiple outputs on the crosspoint switch. In embodiments, the local data collection system includes multiple multiplexing units and multiple data acquisition units receiving multiple data streams from multiple machines in the industrial environment. In embodiments, the local data collection system includes distributed CPLD chips each dedicated to a data bus for logic control of the multiple multiplexing units and the multiple data acquisition units that receive the multiple data streams from the multiple machines in the industrial environment. In embodiments, the local data collection system provides high-amperage input capability using solid state relays.

In embodiments, the method includes powering down at least one of an analog sensor channel and a component board of the local data collection system. In embodiments, the local data collection system includes an external voltage reference for an A/D zero reference that is independent of the voltage of the first sensor and the second sensor. In embodiments, the local data collection system includes a phase-lock loop band-pass tracking filter that obtains slow-speed RPMs and phase information. In embodiments, the method includes digitally deriving phase using on-board timers relative to at least one trigger channel and at least one of multiple inputs on the crosspoint switch.

In embodiments, the method includes auto-scaling with a peak-detector using a separate analog-to-digital converter for peak detection. In embodiments, the method includes routing at least one trigger channel that is raw and buffered into at least one of multiple inputs on the crosspoint switch. In embodiments, the method includes increasing input oversampling rates with at least one delta-sigma analog-to-digital converter to reduce sampling rate outputs and to minimize anti-aliasing filter requirements. In embodiments, the distributed CPLD chips are each dedicated to the data bus for logic control of the multiple multiplexing units and the multiple data acquisition units and each include a high-frequency crystal clock reference divided by at least one of the distributed CPLD chips for at least one delta-sigma analog-to-digital converter to achieve lower sampling rates without digital resampling. In embodiments, the method includes obtaining long blocks of data at a single relatively high-sampling rate with the local data collection system as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units and each data acquisition unit has an onboard card set that stores calibration information and maintenance history of a data acquisition unit in which the onboard card set is located.

In embodiments, the method includes planning data acquisition routes based on hierarchical templates associated with at least the first element in the first machine in the industrial environment. In embodiments, the local data collection system manages data collection bands that define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system creates data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the method includes controlling a GUI system of the local data collection system to manage the data collection bands. The GUI system includes an expert system diagnostic tool. In embodiments, the computing environment of the platform includes cloud-based, machine pattern analysis of state information from multiple sensors to provide anticipated state information for the industrial environment. In embodiments, the computing environment of the platform provides self-organization of data pools based on at least one of the utilization metrics and yield metrics. In embodiments, the computing environment of the platform includes a self-organized swarm of industrial data collectors. In embodiments, each of multiple inputs of the crosspoint switch is individually assignable to any of multiple outputs of the crosspoint switch.

Methods and systems described herein for industrial machine sensor data streaming, collection, processing, and storage may be configured to operate and integrate with existing data collection, processing and storage systems and may include a method for capturing a plurality of streams of sensed data from sensors deployed to monitor aspects of an industrial machine associated with at least one moving part of the machine; at least one of the streams contains a plurality of frequencies of data. The method may include identifying a subset of data in at least one of the plurality of streams that corresponds to data representing at least one predefined frequency. The at least one predefined frequency is represented by a set of data collected from alternate sensors deployed to monitor aspects of the industrial machine associated with the at least one moving part of the machine. The method may further include processing the identified data with a data processing facility that processes the identified data with an algorithm configured to be applied to the set of data collected from alternate sensors. Lastly, the method may include storing the at least one of the streams of data, the identified subset of data, and a result of processing the identified data in an electronic data set.

Methods and systems described herein for industrial machine sensor data streaming, collection, processing, and storage may be configured to operate and integrate with existing data collection, processing, and storage systems and may include a method for applying data captured from sensors deployed to monitor aspects of an industrial machine associated with at least one moving part of the machine. The data is captured with predefined lines of resolution covering a predefined frequency range and is sent to a frequency matching facility that identifies a subset of data streamed from other sensors deployed to monitor aspects of the industrial machine associated with at least one moving part of the machine. The streamed data includes a plurality of lines of resolution and frequency ranges. The subset of data identified corresponds to the lines of resolution and predefined frequency range. This method may include storing the subset of data in an electronic data record in a format that corresponds to a format of the data captured with predefined lines of resolution and signaling to a data processing facility the presence of the stored subset of data. This method may, optionally, include processing the subset of data with at least one set of algorithms, models and pattern recognizers that corresponds to algorithms, models and pattern recognizers associated with processing the data captured with predefined lines of resolution covering a predefined frequency range.

Methods and systems described herein for industrial machine sensor data streaming, collection, processing, and storage may be configured to operate and integrate with existing data collection, processing and storage systems and may include a method for identifying a subset of streamed sensor data, the sensor data captured from sensors deployed to monitor aspects of an industrial machine associated with at least one moving part of the machine, the subset of streamed sensor data at predefined lines of resolution for a predefined frequency range, and establishing a first logical route for communicating electronically between a first computing facility performing the identifying and a second computing facility, wherein identified subset of the streamed sensor data is communicated exclusively over the established first logical route when communicating the subset of streamed sensor data from the first facility to the second facility. This method may further include establishing a second logical route for communicating electronically between the first computing facility and the second computing facility for at least one portion of the streamed sensor data that is not the identified subset. Additionally, this method may further include establishing a third logical route for communicating electronically between the first computing facility and the second computing facility for at least one portion of the streamed sensor data that includes the identified subset and at least one other portion of the data not represented by the identified subset.

Methods and systems described herein for industrial machine sensor data streaming, collection, processing, and storage may be configured to operate and integrate with existing data collection, processing and storage systems and may include a first data sensing and processing system that captures first data from a first set of sensors deployed to monitor aspects of an industrial machine associated with at least one moving part of the machine, the first data covering a set of lines of resolution and a frequency range. This system may include a second data sensing and processing system that captures and streams a second set of data from a second set of sensors deployed to monitor aspects of the industrial machine associated with at least one moving part of the machine, the second data covering a plurality of lines of resolution that includes the set of lines of resolution and a plurality of frequencies that includes the frequency range. The system may enable selecting a portion of the second data that corresponds to the set of lines of resolution and the frequency range of the first data, and processing the selected portion of the second data with the first data sensing and processing system.

Methods and systems described herein for industrial machine sensor data streaming, collection, processing, and storage may be configured to operate and integrate with existing data collection, processing and storage systems and may include a method for automatically processing a portion of a stream of sensed data. The sensed data is received from a first set of sensors deployed to monitor aspects of an industrial machine associated with at least one moving part of the machine. The sensed data is in response to an electronic data structure that facilitates extracting a subset of the stream of sensed data that corresponds to a set of sensed data received from a second set of sensors deployed to monitor the aspects of the industrial machine associated with the at least one moving part of the machine. The set of sensed data is constrained to a frequency range. The stream of sensed data includes a range of frequencies that exceeds the frequency range of the set of sensed data, the processing comprising executing an algorithm on a portion of the stream of sensed data that is constrained to the frequency range of the set of sensed data, the algorithm configured to process the set of sensed data.

Methods and systems described herein for industrial machine sensor data streaming, collection, processing, and storage may be configured to operate and integrate with existing data collection, processing and storage systems and may include a method for receiving first data from sensors deployed to monitor aspects of an industrial machine associated with at least one moving part of the machine. This method may further include detecting at least one of a frequency range and lines of resolution represented by the first data; receiving a stream of data from sensors deployed to monitor the aspects of the industrial machine associated with the at least one moving part of the machine. The stream of data includes: (1) a plurality of frequency ranges and a plurality of lines of resolution that exceeds the frequency range and the lines of resolution represented by the first data; (2) a set of data extracted from the stream of data that corresponds to at least one of the frequency range and the lines of resolution represented by the first data; and (3) the extracted set of data which is processed with a data processing algorithm that is configured to process data within the frequency range and within the lines of resolution of the first data.

In embodiments, a monitoring system for data collection in a mining environment may comprise a data collector communicatively coupled to a plurality of input channels; a data storage structured to store a plurality of collector routes and collected data that correspond to the plurality of input channels, wherein the plurality of collector routes each comprise a different data collection routine, and wherein the collected data comprises data provided by a plurality of input sensors, each of the plurality of input sensors operatively coupled to at least one of a plurality of components of a mining process; a data acquisition circuit structured to interpret a plurality of detection values from the collected data, each of the plurality of detection values corresponding to at least one of the plurality of input channels; and a data analysis circuit structured to analyze the collected data from the plurality of input channels and evaluate a collection routine of the data collector based on the analyzed collected data, wherein the analysis of the collected data reveals an anomalous condition; and a data response circuit structured to alter an operational parameter of the mining process based on the anomalous condition. In embodiments, the anomalous condition may include a pre-failure mode condition for one of the plurality of components. The altered operational parameter may be an operational parameter of one of the plurality of components, such as where the data response circuit may be further structured to adjust the operational parameter by adjusting one of the plurality of collector routes, one of the data collection routines, and the like. The altered operational parameter may be one of the plurality of collector routes of the data collector, and wherein the data response circuit is further structured to alter the one of the plurality of collector routes to increase data monitoring of one of the plurality of components. One of the plurality of input channels may be a continuously monitored alarm, such as where the anomalous condition is an alarm condition. The anomalous condition may include an anomalous operational mode for one of the plurality of components, such as where the data response circuit is further structured to communicate an alarm to a haptic feedback user device in response to the anomalous condition. The altered operational parameter may be a data transmission multiplexing of the data collected from the plurality of input channels. The data analysis circuit may be structured to utilize a neural network model to detect the anomalous condition. The neural network model may be a probabilistic neural network that predicts a fault condition for one of the plurality of components. The neural network model may be a time delay neural network trained on data collected over time from the plurality of input channels.

The neural network model may be a convolutional neural network which provides a recommended route change for one of the plurality of collector routes of the data collector. The data analysis circuit may include an expert system that switches a structure of the neural network based on the data collected from the plurality of input channels.

In embodiments, a computer-implemented method for monitoring data collection in a mining environment may comprise collecting data from a plurality of input channels, wherein the collected data comprises data provided by a plurality of input sensors, each of the plurality of input sensors operatively coupled to at least one of a plurality of components of a mining process; accessing a plurality of collector routes on a data storage, and storing the collected data on the data storage, wherein the plurality of collector routes each comprise a different data collection routine; interpreting a plurality of detection values from the collected data, each of the plurality of detection values corresponding to at least one of the plurality of input channels; and analyzing the collected data and evaluating a collection routine of the data collector based on the analyzed collected data, wherein the analysis of the collected data reveals an anomalous condition; and altering an operational parameter of the mining process based on the anomalous condition. In embodiments, the anomalous condition may include a pre-failure mode condition for one of the plurality of components, and wherein the altering the operational parameter comprises increasing data monitoring of the one of the plurality of components. The analyzing may include determining a vibrational fingerprint for one of the plurality of components. The anomalous condition may include a reduced operating capability for one of the plurality of components, and wherein the altering comprises adjusting an operational parameter of the mining process to reduce a work load of the one of the plurality of components.

In embodiments, a monitoring apparatus for data collection in a mining environment may comprise a data collector component communicatively coupled to a plurality of input channels; a data storage component configured to store a plurality of collector routes and collected data that correspond to the plurality of input channels, wherein the plurality of collector routes each comprise a different data collection routine, and wherein the collected data comprises data provided by a plurality of input sensors, each of the plurality of input sensors operatively coupled to at least one of a plurality of components of a mining process; a data acquisition component configured to interpret a plurality of detection values from the collected data, each of the plurality of detection values corresponding to at least one of the plurality of input channels; and a data analysis component configured to analyze the collected data from the plurality of input channels and evaluate a collection routine of the data collector based on the analyzed collected data, wherein the analysis of the collected data reveals an anomalous condition for one of the mining process or one of the plurality of components; and a data response component configured to alter an operational parameter based on the anomalous condition. In embodiments, the anomalous condition may include the data storage component accessing a haptic feedback user device to store or communicate a portion of the collected data, and wherein the data response component is further configured to communicate an alert to the haptic feedback user device in response to the anomalous condition. The anomalous condition may be a reduced network capability, and wherein the data response circuit is further structured to adjust a collector route of the data collector in response to the anomalous condition.

Methods and systems are disclosed herein for continuous ultrasonic monitoring, including providing continuous ultrasonic monitoring of rotating elements and bearings of an energy production facility; for cloud-based systems including machine pattern recognition based on the fusion of remote, analog industrial sensors or machine pattern analysis of state information from multiple analog industrial sensors to provide anticipated state information for an industrial system; for on-device sensor fusion and data storage for industrial IoT devices, including on-device sensor fusion and data storage for an Industrial IoT device, where data from multiple sensors are multiplexed at the device for storage of a fused data stream; and for self-organizing systems including a self-organizing data marketplace for industrial IoT data, including a self-organizing data marketplace for industrial IoT data, where available data elements are organized in the marketplace for consumption by consumers based on training a self-organizing facility with a training set and feedback from measures of marketplace success, for self-organizing data pools, including self-organization of data pools based on utilization and/or yield metrics, including utilization and/or yield metrics that are tracked for a plurality of data pools, a self-organized swarm of industrial data collectors, including a self-organizing swarm of industrial data collectors that organize among themselves to optimize data collection based on the capabilities and conditions of the members of the swarm, a self-organizing collector, including a self-organizing, multi-sensor data collector that can optimize data collection, power and/or yield based on conditions in its environment, a self-organizing storage for a multi-sensor data collector, including self-organizing storage for a multi-sensor data collector for industrial sensor data, a self-organizing network coding for a multi-sensor data network, including self-organizing network coding for a data network that transports data from multiple sensors in an industrial data collection environment.

Methods and systems are disclosed herein for training artificial intelligence ("AI") models based on industry-specific feedback, including training an AI model based on industry-specific feedback that reflects a measure of utilization, yield, or impact, where the AI model operates on sensor data from an industrial environment; for an industrial IoT distributed ledger, including a distributed ledger supporting the tracking of transactions executed in an automated data marketplace for industrial IoT data; for a network-sensitive collector, including a network condition-sensitive, self-organizing, multi-sensor data collector that can optimize based on bandwidth, quality of service, pricing, and/or other network conditions; for a remotely organized universal data collector that can power up and down sensor interfaces based on need and/or conditions identified in an industrial data collection environment; and for a haptic or multi-sensory user interface, including a wearable haptic or multi-sensory user interface for an industrial sensor data collector, with vibration, heat, electrical, and/or sound outputs.

Methods and systems are disclosed herein for a presentation layer for augmented reality and virtual reality (AR/VR) industrial glasses, where heat map elements are presented based on patterns and/or parameters in collected data; and for condition-sensitive, self-organized tuning of AR/VR interfaces based on feedback metrics and/or training in industrial environments.

In embodiments, a system for data collection, processing, and utilization of signals from at least a first element in a first machine in an industrial environment includes a platform including a computing environment connected to a local data collection system having at least a first sensor signal and a second sensor signal obtained from at least the first machine in the industrial environment. The system includes a first sensor in the local data collection system configured to be connected to the first machine and a second sensor in the local data collection system. The system further includes a cross-point switch in the local data collection system having multiple inputs and multiple outputs including a first input connected to the first sensor and a second input connected to the second sensor. Throughout the present disclosure, wherever a crosspoint switch, multiplexer (MUX) device, or other multiple-input multiple-output data collection or communication device is described, any multi-sensor acquisition device is also contemplated herein. In certain embodiments, a multi-sensor acquisition device includes one or more channels configured for, or compatible with, an analog sensor input. The multiple outputs include a first output and second output configured to be switchable between a condition in which the first output is configured to switch between delivery of the first sensor signal and the second sensor signal and a condition in which there is simultaneous delivery of the first sensor signal from the first output and the second sensor signal from the second output. Each of multiple inputs is configured to be individually assigned to any of the multiple outputs, or combined in any subsets of the inputs to the outputs. Unassigned outputs are configured to be switched off, for example by producing a high-impedance state.

In embodiments, the first sensor signal and the second sensor signal are continuous vibration data about the industrial environment. In embodiments, the second sensor in the local data collection system is configured to be connected to the first machine. In embodiments, the second sensor in the local data collection system is configured to be connected to a second machine in the industrial environment. In embodiments, the computing environment of the platform is configured to compare relative phases of the first and second sensor signals. In embodiments, the first sensor is a single-axis sensor and the second sensor is a three-axis sensor. In embodiments, at least one of the multiple inputs of the crosspoint switch includes internet protocol, front-end signal conditioning, for improved signal-to-noise ratio. In embodiments, the crosspoint switch includes a third input that is configured with a continuously monitored alarm having a pre-determined trigger condition when the third input is unassigned to or undetected at any of the multiple outputs.

In embodiments, the local data collection system includes multiple multiplexing units and multiple data acquisition units receiving multiple data streams from multiple machines in the industrial environment. In embodiments, the local data collection system includes distributed complex programmable hardware device ("CPLD") chips each dedicated to a data bus for logic control of the multiple multiplexing units and the multiple data acquisition units that receive the multiple data streams from the multiple machines in the industrial environment. In embodiments, the local data collection system is configured to provide high-amperage input capability using solid state relays. In embodiments, the local data collection system is configured to power-down at least one of an analog sensor channel and a component board.

In embodiments, the local data collection system includes a phase-lock loop band-pass tracking filter configured to obtain slow-speed revolutions per minute ("RPMs") and phase information. In embodiments, the local data collection system is configured to digitally derive phase using on-board timers relative to at least one trigger channel and at least one of the multiple inputs. In embodiments, the local data collection system includes a peak-detector configured to autoscale using a separate analog-to-digital converter for peak detection. In embodiments, the local data collection system is configured to route at least one trigger channel that is raw and buffered into at least one of the multiple inputs. In embodiments, the local data collection system includes at least one delta-sigma analog-to-digital converter that is configured to increase input oversampling rates to reduce sampling rate outputs and to minimize anti-aliasing filter requirements. In embodiments, the distributed CPLD chips each dedicated to the data bus for logic control of the multiple multiplexing units and the multiple data acquisition units includes as high-frequency crystal clock reference configured to be divided by at least one of the distributed CPLD chips for at least one delta-sigma analog-to-digital converter to achieve lower sampling rates without digital resampling.

In embodiments, the local data collection system is configured to obtain long blocks of data at a single relatively high-sampling rate as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units each having an onboard card set configured to store calibration information and maintenance history of a data acquisition unit in which the onboard card set is located. In embodiments, the local data collection system is configured to plan data acquisition routes based on hierarchical templates.

In embodiments, the local data collection system is configured to manage data collection bands. In embodiments, the data collection bands define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system is configured to create data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the local data collection system includes a graphical user interface ("GUI") system configured to manage the data collection bands. In embodiments, the GUI system includes an expert system diagnostic tool. In embodiments, the platform includes cloud-based, machine pattern analysis of state information from multiple sensors to provide anticipated state information for the industrial environment. In embodiments, the platform is configured to provide self-organization of data pools based on at least one of the utilization metrics and yield metrics. In embodiments, the platform includes a self-organized swarm of industrial data collectors. In embodiments, the local data collection system includes a wearable haptic user interface for an industrial sensor data collector with at least one of vibration, heat, electrical, and sound outputs.

In embodiments, multiple inputs of the crosspoint switch include a third input connected to the second sensor and a fourth input connected to the second sensor. The first sensor signal is from a single-axis sensor at an unchanging location associated with the first machine.

In embodiments, the second sensor is a three-axis sensor. In embodiments, the local data collection system is configured to record gap-free digital waveform data simultaneously from at least the first input, the second input, the third input, and the fourth input. In embodiments, the platform is configured to determine a change in relative phase based on the simultaneously recorded gap-free digital waveform data. In embodiments, the second sensor is configured to be movable to a plurality of positions associated with the first machine while obtaining the simultaneously recorded gap-free digital waveform data. In embodiments, multiple outputs of the crosspoint switch include a third output and fourth output. The second, third, and fourth outputs are assigned together to a sequence of tri-axial sensors each located at different positions associated with the machine. In embodiments, the platform is configured to determine an operating deflection shape based on the change in relative phase and the simultaneously recorded gap-free digital waveform data.

In embodiments, the unchanging location is a position associated with the rotating shaft of the first machine. In embodiments, tri-axial sensors in the sequence of the tri-axial sensors are each located at different positions on the first machine but are each associated with different bearings in the machine. In embodiments, tri-axial sensors in the sequence of the tri-axial sensors are each located at similar positions associated with similar bearings but are each associated with different machines. In embodiments, the local data collection system is configured to obtain the simultaneously recorded gap-free digital waveform data from the first machine while the first machine and a second machine are both in operation. In embodiments, the local data collection system is configured to characterize a contribution from the first machine and the second machine in the simultaneously recorded gap-free digital waveform data from the first machine. In embodiments, the simultaneously recorded gap-free digital waveform data has a duration that is in excess of one minute.

In embodiments, a method of monitoring a machine having at least one shaft supported by a set of bearings includes monitoring a first data channel assigned to a single-axis sensor at an unchanging location associated with the machine. The method includes monitoring second, third, and fourth data channels each assigned to an axis of a three-axis sensor. The method includes recording gap-free digital waveform data simultaneously from all of the data channels while the machine is in operation and determining a change in relative phase based on the digital waveform data.

In embodiments, the tri-axial sensor is located at a plurality of positions associated with the machine while obtaining the digital waveform. In embodiments, the second, third, and fourth channels are assigned together to a sequence of tri-axial sensors each located at different positions associated with the machine. In embodiments, the data is received from all of the sensors simultaneously. In embodiments, the method includes determining an operating deflection shape based on the change in relative phase information and the waveform data. In embodiments, the unchanging location is a position associated with the shaft of the machine. In embodiments, the tri-axial sensors in the sequence of the tri-axial sensors are each located at different positions and are each associated with different bearings in the machine. In embodiments, the unchanging location is a position associated with the shaft of the machine. The tri-axial sensors in the sequence of the tri-axial sensors are each located at different positions and are each associated with different bearings that support the shaft in the machine.

In embodiments, the method includes monitoring the first data channel assigned to the single-axis sensor at an unchanging location located on a second machine. The method includes monitoring the second, the third, and the fourth data channels, each assigned to the axis of a three-axis sensor that is located at the position associated with the second machine. The method also includes recording gap-free digital waveform data simultaneously from all of the data channels from the second machine while both of the machines are in operation. In embodiments, the method includes characterizing the contribution from each of the machines in the gap-free digital waveform data simultaneously from the second machine.

In embodiments, a method for data collection, processing, and utilization of signals with a platform monitoring at least a first element in a first machine in an industrial environment includes obtaining, automatically with a computing environment, at least a first sensor signal and a second sensor signal with a local data collection system that monitors at least the first machine. The method includes connecting a first input of a crosspoint switch of the local data collection system to a first sensor and a second input of the crosspoint switch to a second sensor in the local data collection system. The method includes switching between a condition in which a first output of the crosspoint switch alternates between delivery of at least the first sensor signal and the second sensor signal and a condition in which there is simultaneous delivery of the first sensor signal from the first output and the second sensor signal from a second output of the crosspoint switch. The method also includes switching off unassigned outputs of the crosspoint switch into a high-impedance state.

In embodiments, the first sensor signal and the second sensor signal are continuous vibration data from the industrial environment. In embodiments, the second sensor in the local data collection system is connected to the first machine. In embodiments, the second sensor in the local data collection system is connected to a second machine in the industrial environment. In embodiments, the method includes comparing, automatically with the computing environment, relative phases of the first and second sensor signals. In embodiments, the first sensor is a single-axis sensor and the second sensor is a three-axis sensor. In embodiments, at least the first input of the crosspoint switch includes internet protocol front-end signal conditioning for improved signal-to-noise ratio.

In embodiments, the method includes continuously monitoring at least a third input of the crosspoint switch with an alarm having a pre-determined trigger condition when the third input is unassigned to any of multiple outputs on the crosspoint switch. In embodiments, the local data collection system includes multiple multiplexing units and multiple data acquisition units receiving multiple data streams from multiple machines in the industrial environment. In embodiments, the local data collection system includes distributed CPLD chips each dedicated to a data bus for logic control of the multiple multiplexing units and the multiple data acquisition units that receive the multiple data streams from the multiple machines in the industrial environment. In embodiments, the local data collection system provides high-amperage input capability using solid state relays.

In embodiments, the method includes powering down at least one of an analog sensor channel and a component board of the local data collection system. In embodiments, the local data collection system includes an external voltage reference for an A/D zero reference that is independent of the voltage of the first sensor and the second sensor. In embodiments, the local data collection system includes a phase-lock loop band-pass tracking filter that obtains slow-speed RPMs and phase information. In embodiments, the method includes digitally deriving phase using on-board timers relative to at least one trigger channel and at least one of multiple inputs on the crosspoint switch.

In embodiments, the method includes auto-scaling with a peak-detector using a separate analog-to-digital converter for peak detection. In embodiments, the method includes routing at least one trigger channel that is raw and buffered into at least one of multiple inputs on the crosspoint switch. In embodiments, the method includes increasing input oversampling rates with at least one delta-sigma analog-to-digital converter to reduce sampling rate outputs and to minimize anti-aliasing filter requirements. In embodiments, the distributed CPLD chips are each dedicated to the data bus for logic control of the multiple multiplexing units and the multiple data acquisition units and each include a high-frequency crystal clock reference divided by at least one of the distributed CPLD chips for at least one delta-sigma analog-to-digital converter to achieve lower sampling rates without digital resampling. In embodiments, the method includes obtaining long blocks of data at a single relatively high-sampling rate with the local data collection system as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units and each data acquisition unit has an onboard card set that stores calibration information and maintenance history of a data acquisition unit in which the onboard card set is located.

In embodiments, the method includes planning data acquisition routes based on hierarchical templates associated with at least the first element in the first machine in the industrial environment. In embodiments, the local data collection system manages data collection bands that define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system creates data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the method includes controlling a GUI system of the local data collection system to manage the data collection bands. The GUI system includes an expert system diagnostic tool. In embodiments, the computing environment of the platform includes cloud-based, machine pattern analysis of state information from multiple sensors to provide anticipated state information for the industrial environment. In embodiments, the computing environment of the platform provides self-organization of data pools based on at least one of the utilization metrics and yield metrics. In embodiments, the computing environment of the platform includes a self-organized swarm of industrial data collectors. In embodiments, each of multiple inputs of the crosspoint switch is individually assignable to any of multiple outputs of the crosspoint switch.

Methods and systems described herein for industrial machine sensor data streaming, collection, processing, and storage may be configured to operate and integrate with existing data collection, processing and storage systems and may include a method for capturing a plurality of streams of sensed data from sensors deployed to monitor aspects of an industrial machine associated with at least one moving part of the machine; at least one of the streams contains a plurality of frequencies of data. The method may include identifying a subset of data in at least one of the plurality of streams that corresponds to data representing at least one predefined frequency. The at least one predefined frequency is represented by a set of data collected from alternate sensors deployed to monitor aspects of the industrial machine associated with the at least one moving part of the machine. The method may further include processing the identified data with a data processing facility that processes the identified data with an algorithm configured to be applied to the set of data collected from alternate sensors. Lastly, the method may include storing the at least one of the streams of data, the identified subset of data, and a result of processing the identified data in an electronic data set.

Methods and systems described herein for industrial machine sensor data streaming, collection, processing, and storage may be configured to operate and integrate with existing data collection, processing, and storage systems and may include a method for applying data captured from sensors deployed to monitor aspects of an industrial machine associated with at least one moving part of the machine. The data is captured with predefined lines of resolution covering a predefined frequency range and is sent to a frequency matching facility that identifies a subset of data streamed from other sensors deployed to monitor aspects of the industrial machine associated with at least one moving part of the machine. The streamed data includes a plurality of lines of resolution and frequency ranges. The subset of data identified corresponds to the lines of resolution and predefined frequency range. This method may include storing the subset of data in an electronic data record in a format that corresponds to a format of the data captured with predefined lines of resolution and signaling to a data processing facility the presence of the stored subset of data. This method may, optionally, include processing the subset of data with at least one set of algorithms, models and pattern recognizers that corresponds to algorithms, models and pattern recognizers associated with processing the data captured with predefined lines of resolution covering a predefined frequency range.

Methods and systems described herein for industrial machine sensor data streaming, collection, processing, and storage may be configured to operate and integrate with existing data collection, processing and storage systems and may include a method for identifying a subset of streamed sensor data, the sensor data captured from sensors deployed to monitor aspects of an industrial machine associated with at least one moving part of the machine, the subset of streamed sensor data at predefined lines of resolution for a predefined frequency range, and establishing a first logical route for communicating electronically between a first computing facility performing the identifying and a second computing facility, wherein identified subset of the streamed sensor data is communicated exclusively over the established first logical route when communicating the subset of streamed sensor data from the first facility to the second facility. This method may further include establishing a second logical route for communicating electronically between the first computing facility and the second computing facility for at least one portion of the streamed sensor data that is not the identified subset. Additionally, this method may further include establishing a third logical route for communicating electronically between the first computing facility and the second computing facility for at least one portion of the streamed sensor data that includes the identified subset and at least one other portion of the data not represented by the identified subset.

Methods and systems described herein for industrial machine sensor data streaming, collection, processing, and storage may be configured to operate and integrate with existing data collection, processing and storage systems and may include a first data sensing and processing system that captures first data from a first set of sensors deployed to monitor aspects of an industrial machine associated with at least one moving part of the machine, the first data covering a set of lines of resolution and a frequency range. This system may include a second data sensing and processing system that captures and streams a second set of data from a second set of sensors deployed to monitor aspects of the industrial machine associated with at least one moving part of the machine, the second data covering a plurality of lines of resolution that includes the set of lines of resolution and a plurality of frequencies that includes the frequency range. The system may enable selecting a portion of the second data that corresponds to the set of lines of resolution and the frequency range of the first data, and processing the selected portion of the second data with the first data sensing and processing system.

Methods and systems described herein for industrial machine sensor data streaming, collection, processing, and storage may be configured to operate and integrate with existing data collection, processing and storage systems and may include a method for automatically processing a portion of a stream of sensed data. The sensed data is received from a first set of sensors deployed to monitor aspects of an industrial machine associated with at least one moving part of the machine. The sensed data is in response to an electronic data structure that facilitates extracting a subset of the stream of sensed data that corresponds to a set of sensed data received from a second set of sensors deployed to monitor the aspects of the industrial machine associated with the at least one moving part of the machine. The set of sensed data is constrained to a frequency range. The stream of sensed data includes a range of frequencies that exceeds the frequency range of the set of sensed data, the processing comprising executing an algorithm on a portion of the stream of sensed data that is constrained to the frequency range of the set of sensed data, the algorithm configured to process the set of sensed data.

Methods and systems described herein for industrial machine sensor data streaming, collection, processing, and storage may be configured to operate and integrate with existing data collection, processing and storage systems and may include a method for receiving first data from sensors deployed to monitor aspects of an industrial machine associated with at least one moving part of the machine. This method may further include detecting at least one of a frequency range and lines of resolution represented by the first data; receiving a stream of data from sensors deployed to monitor the aspects of the industrial machine associated with the at least one moving part of the machine. The stream of data includes: (1) a plurality of frequency ranges and a plurality of lines of resolution that exceeds the frequency range and the lines of resolution represented by the first data; (2) a set of data extracted from the stream of data that corresponds to at least one of the frequency range and the lines of resolution represented by the first data; and (3) the extracted set of data which is processed with a data processing algorithm that is configured to process data within the frequency range and within the lines of resolution of the first data.

In embodiments, a monitoring system for data collection in an industrial drilling environment may comprise a data collector communicatively coupled to a plurality of input channels, wherein a subset of the plurality of input channels are communicatively coupled to sensors measuring operational parameters from an industrial drilling component; a data storage structured to store a plurality of collector routes and collected data that correspond to the plurality of input channels, wherein the plurality of collector routes each comprise a different data collection routine; a data acquisition circuit structured to interpret a plurality of detection values from the collected data, each of the plurality of detection values corresponding to at least one of the plurality of input channels; a data analysis circuit structured to analyze the collected data from the plurality of input channels to detect an anomalous condition associated with the industrial drilling component; and a data response circuit structured to switch one of the data collection routines from a first data collection routine to a second collection routine based on the detection of the anomalous condition. In embodiments, the anomalous condition may be a pre-failure mode condition for the industrial drilling component. The second collection routine may include data collector input channels coupled to sensors measuring additional operational parameters from the industrial drilling component relative to the first data collection routine. One of the plurality of input channels may be connected to a tri-axial sensor connected to multiple input channels for monitoring different positions associated with the industrial drilling component. One of the plurality of input channels may provide for a gap-free digital waveform from which the data analysis circuit detects the anomalous condition. The data analysis circuit may be further structured to analyze at least two of the plurality of input channels, to determine a relative phase value between the at least two of the plurality of input channels, and to detect the anomalous condition in response to the relative phase difference. The industrial drilling component may include a rotating component, where the data analysis circuit may be further structured to perform band-pass tracking associated with the rotating component to detect the anomalous condition. The data collector may include at least one delta-sigma analog-to-digital converter that is configured to increase input oversampling rates. The industrial drilling component may include a rotating component, the system further comprising a frequency evaluation circuit structured to detect a signal on one of the plurality of input channels at frequencies higher than a frequency at which the rotating component rotates. The data analysis circuit may be further structured to utilize a neural network model to detect the anomalous condition. The neural network model may be a probabilistic neural network that predicts a fault condition for the industrial drilling component. The neural network model may be a time delay neural network trained on data collected over time from the plurality of input channels. The neural network model may be a convolutional neural network which provides a recommended route change for the data collector based on the data collected from the plurality of input channels, and wherein the data response circuit is further structured to adjust one of the collector routes in response to the recommended route change.

In embodiments, a computer-implemented method for monitoring an industrial drilling environment may comprise collecting data from a plurality of input channels, wherein a subset of the plurality of input channels are communicatively coupled to sensors measuring operational parameters from an industrial drilling component; accessing a plurality of collector routes on a data storage, and storing the collected data on the data storage, wherein the plurality of collector routes each comprise a different data collection routine; interpreting a plurality of detection values from the collected data, each of the plurality of detection values corresponding to at least one of the plurality of input channels; analyzing the collected data to detect an anomalous condition associated with the industrial drilling component; and switching from a first data collection routine to a second collection routine based on the detection of the anomalous condition. In embodiments, the anomalous condition may be a pre-failure mode condition for the industrial drilling component, and wherein the switching increases data monitoring of the industrial drilling component. Detecting the anomalous condition may include determining a relative phase difference between the detection values interpreted from two of the plurality of input channels. The industrial drilling component may include a rotating component, where detecting the anomalous condition includes a performing a frequency analysis at a selected multiple of a rotational speed of the rotating component.

In embodiments, a monitoring apparatus for data collection in an industrial drilling environment may comprise a data collector component communicatively coupled to a plurality of input channels, wherein a subset of the plurality of input channels are communicatively coupled to sensors measuring operational parameters from an industrial drilling component; a data storage component structured to store a plurality of collector routes and collected data that correspond to the plurality of input channels, wherein the plurality of collector routes each comprise a different data collection routine; a data acquisition component structured to interpret a plurality of detection values from the collected data, each of the plurality of detection values corresponding to at least one of the plurality of input channels; a data analysis component structured to analyze the collected data from the plurality of input channels to detect an anomalous condition associated with one of the plurality of industrial drilling components; and a data response circuit structured to adjust at least one of the data collection routines based on the detection of the anomalous condition. In embodiments, the data response circuit may be further structured to adjust the at least one of the data collection routines by changing at least one of: the collected data such that different sensors are utilized to monitor the industrial drilling component; and sensor configuration values such that operational parameters of the sensors monitoring the industrial drilling component are changed. The anomalous condition may include a reduced operating capability of the industrial drilling component, and wherein the data response circuit is further structured to provide a drilling process adjustment to reduce a work load of the industrial drilling component.

Methods and systems are disclosed herein for continuous ultrasonic monitoring, including providing continuous ultrasonic monitoring of rotating elements and bearings of an energy production facility; for cloud-based systems including machine pattern recognition based on the fusion of remote, analog industrial sensors or machine pattern analysis of state information from multiple analog industrial sensors to provide anticipated state information for an industrial system; for on-device sensor fusion and data storage for industrial IoT devices, including on-device sensor fusion and data storage for an Industrial IoT device, where data from multiple sensors are multiplexed at the device for storage of a fused data stream; and for self-organizing systems including a self-organizing data marketplace for industrial IoT data, including a self-organizing data marketplace for industrial IoT data, where available data elements are organized in the marketplace for consumption by consumers based on training a self-organizing facility with a training set and feedback from measures of marketplace success, for self-organizing data pools, including self-organization of data pools based on utilization and/or yield metrics, including utilization and/or yield metrics that are tracked for a plurality of data pools, a self-organized swarm of industrial data collectors, including a self-organizing swarm of industrial data collectors that organize among themselves to optimize data collection based on the capabilities and conditions of the members of the swarm, a self-organizing collector, including a self-organizing, multi-sensor data collector that can optimize data collection, power and/or yield based on conditions in its environment, a self-organizing storage for a multi-sensor data collector, including self-organizing storage for a multi-sensor data collector for industrial sensor data, a self-organizing network coding for a multi-sensor data network, including self-organizing network coding for a data network that transports data from multiple sensors in an industrial data collection environment.

Methods and systems are disclosed herein for training artificial intelligence ("AI") models based on industry-specific feedback, including training an AI model based on industry-specific feedback that reflects a measure of utilization, yield, or impact, where the AI model operates on sensor data from an industrial environment; for an industrial IoT distributed ledger, including a distributed ledger supporting the tracking of transactions executed in an automated data marketplace for industrial IoT data; for a network-sensitive collector, including a network condition-sensitive, self-organizing, multi-sensor data collector that can optimize based on bandwidth, quality of service, pricing, and/or other network conditions; for a remotely organized universal data collector that can power up and down sensor interfaces based on need and/or conditions identified in an industrial data collection environment; and for a haptic or multi-sensory user interface, including a wearable haptic or multi-sensory user interface for an industrial sensor data collector, with vibration, heat, electrical, and/or sound outputs.

Methods and systems are disclosed herein for a presentation layer for augmented reality and virtual reality (AR/VR) industrial glasses, where heat map elements are presented based on patterns and/or parameters in collected data; and for condition-sensitive, self-organized tuning of AR/VR interfaces based on feedback metrics and/or training in industrial environments.

In embodiments, a system for data collection, processing, and utilization of signals from at least a first element in a first machine in an industrial environment includes a platform including a computing environment connected to a local data collection system having at least a first sensor signal and a second sensor signal obtained from at least the first machine in the industrial environment. The system includes a first sensor in the local data collection system configured to be connected to the first machine and a second sensor in the local data collection system. The system further includes a crosspoint switch in the local data collection system having multiple inputs and multiple outputs including a first input connected to the first sensor and a second input connected to the second sensor. Throughout the present disclosure, wherever a crosspoint switch, multiplexer (MUX) device, or other multiple-input multiple-output data collection or communication device is described, any multi-sensor acquisition device is also contemplated herein. In certain embodiments, a multi-sensor acquisition device includes one or more channels configured for, or compatible with, an analog sensor input. The multiple outputs include a first output and second output configured to be switchable between a condition in which the first output is configured to switch between delivery of the first sensor signal and the second sensor signal and a condition in which there is simultaneous delivery of the first sensor signal from the first output and the second sensor signal from the second output. Each of multiple inputs is configured to be individually assigned to any of the multiple outputs, or combined in any subsets of the inputs to the outputs. Unassigned outputs are configured to be switched off, for example by producing a high-impedance state.

In embodiments, the first sensor signal and the second sensor signal are continuous vibration data about the industrial environment. In embodiments, the second sensor in the local data collection system is configured to be connected to the first machine. In embodiments, the second sensor in the local data collection system is configured to be connected to a second machine in the industrial environment. In embodiments, the computing environment of the platform is configured to compare relative phases of the first and second sensor signals. In embodiments, the first sensor is a single-axis sensor and the second sensor is a three-axis sensor. In embodiments, at least one of the multiple inputs of the crosspoint switch includes internet protocol, front-end signal conditioning, for improved signal-to-noise ratio. In embodiments, the crosspoint switch includes a third input that is configured with a continuously monitored alarm having a pre-determined trigger condition when the third input is unassigned to or undetected at any of the multiple outputs.

In embodiments, the local data collection system includes multiple multiplexing units and multiple data acquisition units receiving multiple data streams from multiple machines in the industrial environment. In embodiments, the local data collection system includes distributed complex programmable hardware device ("CPLD") chips each dedicated to a data bus for logic control of the multiple multiplexing units and the multiple data acquisition units that receive the multiple data streams from the multiple machines in the industrial environment. In embodiments, the local data collection system is configured to provide high-amperage input capability using solid state relays. In embodiments, the local data collection system is configured to power-down at least one of an analog sensor channel and a component board.

In embodiments, the local data collection system includes a phase-lock loop band-pass tracking filter configured to obtain slow-speed revolutions per minute ("RPMs") and phase information. In embodiments, the local data collection system is configured to digitally derive phase using on-board timers relative to at least one trigger channel and at least one of the multiple inputs. In embodiments, the local data collection system includes a peak-detector configured to autoscale using a separate analog-to-digital converter for peak detection. In embodiments, the local data collection system is configured to route at least one trigger channel that is raw and buffered into at least one of the multiple inputs. In embodiments, the local data collection system includes at least one delta-sigma analog-to-digital converter that is configured to increase input oversampling rates to reduce sampling rate outputs and to minimize anti-aliasing filter requirements. In embodiments, the distributed CPLD chips each dedicated to the data bus for logic control of the multiple multiplexing units and the multiple data acquisition units includes as high-frequency crystal clock reference configured to be divided by at least one of the distributed CPLD chips for at least one delta-sigma analog-to-digital converter to achieve lower sampling rates without digital resampling.

In embodiments, the local data collection system is configured to obtain long blocks of data at a single relatively high-sampling rate as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units each having an onboard card set configured to store calibration information and maintenance history of a data acquisition unit in which the onboard card set is located. In embodiments, the local data collection system is configured to plan data acquisition routes based on hierarchical templates.

In embodiments, the local data collection system is configured to manage data collection bands. In embodiments, the data collection bands define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system is configured to create data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the local data collection system includes a graphical user interface ("GUI") system configured to manage the data collection bands. In embodiments, the GUI system includes an expert system diagnostic tool. In embodiments, the platform includes cloud-based, machine pattern analysis of state information from multiple sensors to provide anticipated state information for the industrial environment. In embodiments, the platform is configured to provide self-organization of data pools based on at least one of the utilization metrics and yield metrics. In embodiments, the platform includes a self-organized swarm of industrial data collectors. In embodiments, the local data collection system includes a wearable haptic user interface for an industrial sensor data collector with at least one of vibration, heat, electrical, and sound outputs.

In embodiments, multiple inputs of the crosspoint switch include a third input connected to the second sensor and a fourth input connected to the second sensor. The first sensor signal is from a single-axis sensor at an unchanging location associated with the first machine. In embodiments, the second sensor is a three-axis sensor. In embodiments, the local data collection system is configured to record gap-free digital waveform data simultaneously from at least the first input, the second input, the third input, and the fourth input. In embodiments, the platform is configured to determine a change in relative phase based on the simultaneously recorded gap-free digital waveform data. In embodiments, the second sensor is configured to be movable to a plurality of positions associated with the first machine while obtaining the simultaneously recorded gap-free digital waveform data. In embodiments, multiple outputs of the crosspoint switch include a third output and fourth output. The second, third, and fourth outputs are assigned together to a sequence of tri-axial sensors each located at different positions associated with the machine. In embodiments, the platform is configured to determine an operating deflection shape based on the change in relative phase and the simultaneously recorded gap-free digital waveform data.

In embodiments, the unchanging location is a position associated with the rotating shaft of the first machine. In embodiments, tri-axial sensors in the sequence of the tri-axial sensors are each located at different positions on the first machine but are each associated with different bearings in the machine. In embodiments, tri-axial sensors in the sequence of the tri-axial sensors are each located at similar positions associated with similar bearings but are each associated with different machines. In embodiments, the local data collection system is configured to obtain the simultaneously recorded gap-free digital waveform data from the first machine while the first machine and a second machine are both in operation. In embodiments, the local data collection system is configured to characterize a contribution from the first machine and the second machine in the simultaneously recorded gap-free digital waveform data from the first machine. In embodiments, the simultaneously recorded gap-free digital waveform data has a duration that is in excess of one minute.

In embodiments, a method of monitoring a machine having at least one shaft supported by a set of bearings includes monitoring a first data channel assigned to a single-axis sensor at an unchanging location associated with the machine. The method includes monitoring second, third, and fourth data channels each assigned to an axis of a three-axis sensor. The method includes recording gap-free digital waveform data simultaneously from all of the data channels while the machine is in operation and determining a change in relative phase based on the digital waveform data.

In embodiments, the tri-axial sensor is located at a plurality of positions associated with the machine while obtaining the digital waveform. In embodiments, the second, third, and fourth channels are assigned together to a sequence of tri-axial sensors each located at different positions associated with the machine. In embodiments, the data is received from all of the sensors simultaneously. In embodiments, the method includes determining an operating deflection shape based on the change in relative phase information and the waveform data. In embodiments, the unchanging location is a position associated with the shaft of the machine. In embodiments, the tri-axial sensors in the sequence of the tri-axial sensors are each located at different positions and are each associated with different bearings in the machine. In embodiments, the unchanging location is a position associated with the shaft of the machine. The tri-axial sensors in the sequence of the tri-axial sensors are each located at different positions and are each associated with different bearings that support the shaft in the machine.

In embodiments, the method includes monitoring the first data channel assigned to the single-axis sensor at an unchanging location located on a second machine. The method includes monitoring the second, the third, and the fourth data channels, each assigned to the axis of a three-axis sensor that is located at the position associated with the second machine. The method also includes recording gap-free digital waveform data simultaneously from all of the data channels from the second machine while both of the machines are in operation. In embodiments, the method includes characterizing the contribution from each of the machines in the gap-free digital waveform data simultaneously from the second machine.

In embodiments, a method for data collection, processing, and utilization of signals with a platform monitoring at least a first element in a first machine in an industrial environment includes obtaining, automatically with a computing environment, at least a first sensor signal and a second sensor signal with a local data collection system that monitors at least the first machine. The method includes connecting a first input of a crosspoint switch of the local data collection system to a first sensor and a second input of the crosspoint switch to a second sensor in the local data collection system. The method includes switching between a condition in which a first output of the crosspoint switch alternates between delivery of at least the first sensor signal and the second sensor signal and a condition in which there is simultaneous delivery of the first sensor signal from the first output and the second sensor signal from a second output of the crosspoint switch. The method also includes switching off unassigned outputs of the crosspoint switch into a high-impedance state.

In embodiments, the first sensor signal and the second sensor signal are continuous vibration data from the industrial environment. In embodiments, the second sensor in the local data collection system is connected to the first machine. In embodiments, the second sensor in the local data collection system is connected to a second machine in the industrial environment. In embodiments, the method includes comparing, automatically with the computing environment, relative phases of the first and second sensor signals. In embodiments, the first sensor is a single-axis sensor and the second sensor is a three-axis sensor. In embodiments, at least the first input of the crosspoint switch includes internet protocol front-end signal conditioning for improved signal-to-noise ratio.

In embodiments, the method includes continuously monitoring at least a third input of the crosspoint switch with an alarm having a pre-determined trigger condition when the third input is unassigned to any of multiple outputs on the crosspoint switch. In embodiments, the local data collection system includes multiple multiplexing units and multiple data acquisition units receiving multiple data streams from multiple machines in the industrial environment. In embodiments, the local data collection system includes distributed CPLD chips each dedicated to a data bus for logic control of the multiple multiplexing units and the multiple data acquisition units that receive the multiple data streams from the multiple machines in the industrial environment. In embodiments, the local data collection system provides high-amperage input capability using solid state relays.

In embodiments, the method includes powering down at least one of an analog sensor channel and a component board of the local data collection system. In embodiments, the local data collection system includes an external voltage reference for an A/D zero reference that is independent of the voltage of the first sensor and the second sensor. In embodiments, the local data collection system includes a phase-lock loop band-pass tracking filter that obtains slow-speed RPMs and phase information. In embodiments, the method includes digitally deriving phase using on-board timers relative to at least one trigger channel and at least one of multiple inputs on the crosspoint switch.

In embodiments, the method includes autoscaling with a peak-detector using a separate analog-to-digital converter for peak detection. In embodiments, the method includes routing at least one trigger channel that is raw and buffered into at least one of multiple inputs on the crosspoint switch. In embodiments, the method includes increasing input oversampling rates with at least one delta-sigma analog-to-digital converter to reduce sampling rate outputs and to minimize anti-aliasing filter requirements. In embodiments, the distributed CPLD chips are each dedicated to the data bus for logic control of the multiple multiplexing units and the multiple data acquisition units and each include a high-frequency crystal clock reference divided by at least one of the distributed CPLD chips for at least one delta-sigma analog-to-digital converter to achieve lower sampling rates without digital resampling. In embodiments, the method includes obtaining long blocks of data at a single relatively high-sampling rate with the local data collection system as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units and each data acquisition unit has an onboard card set that stores calibration information and maintenance history of a data acquisition unit in which the onboard card set is located.

In embodiments, the method includes planning data acquisition routes based on hierarchical templates associated with at least the first element in the first machine in the industrial environment. In embodiments, the local data collection system manages data collection bands that define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system creates data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the method includes controlling a GUI system of the local data collection system to manage the data collection bands. The GUI system includes an expert system diagnostic tool. In embodiments, the computing environment of the platform includes cloud-based, machine pattern analysis of state information from multiple sensors to provide anticipated state information for the industrial environment. In embodiments, the computing environment of the platform provides self-organization of data pools based on at least one of the utilization metrics and yield metrics. In embodiments, the computing environment of the platform includes a self-organized swarm of industrial data collectors. In embodiments, each of multiple inputs of the crosspoint switch is individually assignable to any of multiple outputs of the crosspoint switch.

Methods and systems described herein for industrial machine sensor data streaming, collection, processing, and storage may be configured to operate and integrate with existing data collection, processing and storage systems and may include a method for capturing a plurality of streams of sensed data from sensors deployed to monitor aspects of an industrial machine associated with at least one moving part of the machine; at least one of the streams contains a plurality of frequencies of data. The method may include identifying a subset of data in at least one of the plurality of streams that corresponds to data representing at least one predefined frequency. The at least one predefined frequency is represented by a set of data collected from alternate sensors deployed to monitor aspects of the industrial machine associated with the at least one moving part of the machine. The method may further include processing the identified data with a data processing facility that processes the identified data with an algorithm configured to be applied to the set of data collected from alternate sensors. Lastly, the method may include storing the at least one of the streams of data, the identified subset of data, and a result of processing the identified data in an electronic data set.

Methods and systems described herein for industrial machine sensor data streaming, collection, processing, and storage may be configured to operate and integrate with existing data collection, processing, and storage systems and may include a method for applying data captured from sensors deployed to monitor aspects of an industrial machine associated with at least one moving part of the machine. The data is captured with predefined lines of resolution covering a predefined frequency range and is sent to a frequency matching facility that identifies a subset of data streamed from other sensors deployed to monitor aspects of the industrial machine associated with at least one moving part of the machine. The streamed data includes a plurality of lines of resolution and frequency ranges. The subset of data identified corresponds to the lines of resolution and predefined frequency range. This method may include storing the subset of data in an electronic data record in a format that corresponds to a format of the data captured with predefined lines of resolution and signaling to a data processing facility the presence of the stored subset of data. This method may, optionally, include processing the subset of data with at least one set of algorithms, models and pattern recognizers that corresponds to algorithms, models and pattern recognizers associated with processing the data captured with predefined lines of resolution covering a predefined frequency range.

Methods and systems described herein for industrial machine sensor data streaming, collection, processing, and storage may be configured to operate and integrate with existing data collection, processing and storage systems and may include a method for identifying a subset of streamed sensor data, the sensor data captured from sensors deployed to monitor aspects of an industrial machine associated with at least one moving part of the machine, the subset of streamed sensor data at predefined lines of resolution for a predefined frequency range, and establishing a first logical route for communicating electronically between a first computing facility performing the identifying and a second computing facility, wherein identified subset of the streamed sensor data is communicated exclusively over the established first logical route when communicating the subset of streamed sensor data from the first facility to the second facility. This method may further include establishing a second logical route for communicating electronically between the first computing facility and the second computing facility for at least one portion of the streamed sensor data that is not the identified subset. Additionally, this method may further include establishing a third logical route for communicating electronically between the first computing facility and the second computing facility for at least one portion of the streamed sensor data that includes the identified subset and at least one other portion of the data not represented by the identified subset.

Methods and systems described herein for industrial machine sensor data streaming, collection, processing, and storage may be configured to operate and integrate with existing data collection, processing and storage systems and may include a first data sensing and processing system that captures first data from a first set of sensors deployed to monitor aspects of an industrial machine associated with at least one moving part of the machine, the first data covering a set of lines of resolution and a frequency range. This system may include a second data sensing and processing system that captures and streams a second set of data from a second set of sensors deployed to monitor aspects of the industrial machine associated with at least one moving part of the machine, the second data covering a plurality of lines of resolution that includes the set of lines of resolution and a plurality of frequencies that includes the frequency range. The system may enable selecting a portion of the second data that corresponds to the set of lines of resolution and the frequency range of the first data, and processing the selected portion of the second data with the first data sensing and processing system.

Methods and systems described herein for industrial machine sensor data streaming, collection, processing, and storage may be configured to operate and integrate with existing data collection, processing and storage systems and may include a method for automatically processing a portion of a stream of sensed data. The sensed data is received from a first set of sensors deployed to monitor aspects of an industrial machine associated with at least one moving part of the machine. The sensed data is in response to an electronic data structure that facilitates extracting a subset of the stream of sensed data that corresponds to a set of sensed data received from a second set of sensors deployed to monitor the aspects of the industrial machine associated with the at least one moving part of the machine. The set of sensed data is constrained to a frequency range. The stream of sensed data includes a range of frequencies that exceeds the frequency range of the set of sensed data, the processing comprising executing an algorithm on a portion of the stream of sensed data that is constrained to the frequency range of the set of sensed data, the algorithm configured to process the set of sensed data.

Methods and systems described herein for industrial machine sensor data streaming, collection, processing, and storage may be configured to operate and integrate with existing data collection, processing and storage systems and may include a method for receiving first data from sensors deployed to monitor aspects of an industrial machine associated with at least one moving part of the machine. This method may further include detecting at least one of a frequency range and lines of resolution represented by the first data; receiving a stream of data from sensors deployed to monitor the aspects of the industrial machine associated with the at least one moving part of the machine. The stream of data includes: (1) a plurality of frequency ranges and a plurality of lines of resolution that exceeds the frequency range and the lines of resolution represented by the first data; (2) a set of data extracted from the stream of data that corresponds to at least one of the frequency range and the lines of resolution represented by the first data; and (3) the extracted set of data which is processed with a data processing algorithm that is configured to process data within the frequency range and within the lines of resolution of the first data.

In embodiments, a system for process monitoring through data collection in an industrial drilling environment may comprise a data collector communicatively coupled to a plurality of input channels, each input channel connected to a monitoring point from which data is collected, the collected data providing a plurality of process parameter values for the industrial drilling environment; a data storage structured to store collected data from the plurality of input channels; a data acquisition circuit structured to interpret the plurality of process parameter values from the collected data; and a data analysis circuit structured to analyze the plurality of process parameter values to detect a process condition associated with the industrial drilling environment, wherein an operational process for the industrial drilling environment is altered based on the analysis of the plurality of process parameter values. In embodiments, the operational process may be a rate of material flow in the industrial drilling environment. In embodiments, the operational process may be a rotational rate of a drilling rig component in the industrial drilling environment. The data storage may store a plurality of collector routes, wherein the plurality of collector routes each comprise a different data collection routine, wherein a selected collector route is switched from a first collector route to a second collector route based on the analysis of the plurality of process parameter values. The switched collector route may be due to the data analysis circuit detecting a change in an operating stage of the industrial drilling environment. The monitoring point may provide a continuously monitored alarm having a pre-determined trigger condition, and the data analysis circuit detects the pre-determined trigger condition. The process condition may be a failure condition or an off-nominal condition for an industrial drilling component, wherein the operational process is altered to decrease a safety risk. The operational process may be altered to increase productivity the industrial drilling environment. The data analysis circuit may utilize a neural network to analyze the plurality of process parameter values. The neural network may be a probabilistic neural network to predict the process condition as a fault condition. The neural network may be a convolutional neural network to make a recommendation based on the analysis of the plurality of process parameter values. The neural network may be switched between a first neural network to a second neural network by an expert system. The data analysis circuit may compare the plurality of process parameter values to a stored vibration fingerprint to detect the process condition. The data analysis circuit may utilize a noise pattern analysis to detect the process condition.

In embodiments, a computer-implemented method for process monitoring through data collection in an industrial drilling environment may comprise providing a data collector communicatively coupled to a plurality of input channels, each input channel connected to a monitoring point from which data is collected, the collected data providing a plurality of process parameter values for the industrial drilling environment; providing a data storage structured to store collected data from the plurality of input channels; providing a data acquisition circuit structured to interpret the plurality of process parameter values from the collected data; and providing a data analysis circuit structured to analyze the plurality of process parameter values to detect a process condition associated with the industrial drilling environment, wherein an operational process for the industrial drilling environment is altered based on the analysis of the plurality of process parameter values. In embodiments, the operational process may be a rotational rate of a drilling rig component in the industrial drilling environment. The data storage may further store a plurality of collector routes, wherein the plurality of collector routes may each include a different data collection routine, wherein the collector route is switched from a first collector route to a second collector route based on the analysis of the plurality of process parameter values.

In embodiments, an apparatus for process monitoring through data collection in an industrial drilling environment may comprise a data collector component communicatively coupled to a plurality of input channels, each input channel connected to a monitoring point from which data is collected, the collected data providing a plurality of process parameter values for the industrial drilling environment; a data storage component structured to store collected data from the plurality of input channels; a data acquisition component structured to interpret the plurality of process parameter values from the collected data; and a data analysis component structured to analyze the plurality of process parameter values to detect a process condition associated with the industrial drilling environment, wherein an operational process for the industrial drilling environment is altered based on the analysis of the plurality of process parameter values. In embodiments, the operational process may be a rotational rate of a drilling rig component in the industrial drilling environment. The data storage component may store a plurality of collector routes, wherein the plurality of collector routes each comprise a different data collection routine, wherein the collector route is switched from a first collector route to a second collector route based on the analysis of the plurality of process parameter values.

Methods and systems are disclosed herein for continuous ultrasonic monitoring, including providing continuous ultrasonic monitoring of rotating elements and bearings of an energy production facility; for cloud-based systems including machine pattern recognition based on the fusion of remote, analog industrial sensors or machine pattern analysis of state information from multiple analog industrial sensors to provide anticipated state information for an industrial system; for on-device sensor fusion and data storage for industrial IoT devices, including on-device sensor fusion and data storage for an Industrial IoT device, where data from multiple sensors are multiplexed at the device for storage of a fused data stream; and for self-organizing systems including a self-organizing data marketplace for industrial IoT data, including a self-organizing data marketplace for industrial IoT data, where available data elements are organized in the marketplace for consumption by consumers based on training a self-organizing facility with a training set and feedback from measures of marketplace success, for self-organizing data pools, including self-organization of data pools based on utilization and/or yield metrics, including utilization and/or yield metrics that are tracked for a plurality of data pools, a self-organized swarm of industrial data collectors, including a self-organizing swarm of industrial data collectors that organize among themselves to optimize data collection based on the capabilities and conditions of the members of the swarm, a self-organizing collector, including a self-organizing, multi-sensor data collector that can optimize data collection, power and/or yield based on conditions in its environment, a self-organizing storage for a multi-sensor data collector, including self-organizing storage for a multi-sensor data collector for industrial sensor data, a self-organizing network coding for a multi-sensor data network, including self-organizing network coding for a data network that transports data from multiple sensors in an industrial data collection environment.

Methods and systems are disclosed herein for training artificial intelligence ("AI") models based on industry-specific feedback, including training an AI model based on industry-specific feedback that reflects a measure of utilization, yield, or impact, where the AI model operates on sensor data from an industrial environment; for an industrial IoT distributed ledger, including a distributed ledger supporting the tracking of transactions executed in an automated data marketplace for industrial IoT data; for a network-sensitive collector, including a network condition-sensitive, self-organizing, multi-sensor data collector that can optimize based on bandwidth, quality of service, pricing, and/or other network conditions; for a remotely organized universal data collector that can power up and down sensor interfaces based on need and/or conditions identified in an industrial data collection environment; and for a haptic or multi-sensory user interface, including a wearable haptic or multi-sensory user interface for an industrial sensor data collector, with vibration, heat, electrical, and/or sound outputs.

Methods and systems are disclosed herein for a presentation layer for augmented reality and virtual reality (AR/VR) industrial glasses, where heat map elements are presented based on patterns and/or parameters in collected data; and for condition-sensitive, self-organized tuning of AR/VR interfaces based on feedback metrics and/or training in industrial environments.

In embodiments, a system for data collection, processing, and utilization of signals from at least a first element in a first machine in an industrial environment includes a platform including a computing environment connected to a local data collection system having at least a first sensor signal and a second sensor signal obtained from at least the first machine in the industrial environment. The system includes a first sensor in the local data collection system configured to be connected to the first machine and a second sensor in the local data collection system. The system further includes a crosspoint switch in the local data collection system having multiple inputs and multiple outputs including a first input connected to the first sensor and a second input connected to the second sensor. Throughout the present disclosure, wherever a crosspoint switch, multiplexer (MUX) device, or other multiple-input multiple-output data collection or communication device is described, any multi-sensor acquisition device is also contemplated herein. In certain embodiments, a multi-sensor acquisition device includes one or more channels configured for, or compatible with, an analog sensor input. The multiple outputs include a first output and second output configured to be switchable between a condition in which the first output is configured to switch between delivery of the first sensor signal and the second sensor signal and a condition in which there is simultaneous delivery of the first sensor signal from the first output and the second sensor signal from the second output. Each of multiple inputs is configured to be individually assigned to any of the multiple outputs, or combined in any subsets of the inputs to the outputs. Unassigned outputs are configured to be switched off, for example by producing a high-impedance state.

In embodiments, the first sensor signal and the second sensor signal are continuous vibration data about the industrial environment. In embodiments, the second sensor in the local data collection system is configured to be connected to the first machine. In embodiments, the second sensor in the local data collection system is configured to be connected to a second machine in the industrial environment. In embodiments, the computing environment of the platform is configured to compare relative phases of the first and second sensor signals. In embodiments, the first sensor is a single-axis sensor and the second sensor is a three-axis sensor. In embodiments, at least one of the multiple inputs of the crosspoint switch includes internet protocol, front-end signal conditioning, for improved signal-to-noise ratio. In embodiments, the crosspoint switch includes a third input that is configured with a continuously monitored alarm having a pre-determined trigger condition when the third input is unassigned to or undetected at any of the multiple outputs.

In embodiments, the local data collection system includes multiple multiplexing units and multiple data acquisition units receiving multiple data streams from multiple machines in the industrial environment. In embodiments, the local data collection system includes distributed complex programmable hardware device ("CPLD") chips each dedicated to a data bus for logic control of the multiple multiplexing units and the multiple data acquisition units that receive the multiple data streams from the multiple machines in the industrial environment. In embodiments, the local data collection system is configured to provide high-amperage input capability using solid state relays. In embodiments, the local data collection system is configured to power-down at least one of an analog sensor channel and a component board.

In embodiments, the local data collection system includes a phase-lock loop band-pass tracking filter configured to obtain slow-speed revolutions per minute ("RPMs") and phase information. In embodiments, the local data collection system is configured to digitally derive phase using on-board timers relative to at least one trigger channel and at least one of the multiple inputs. In embodiments, the local data collection system includes a peak-detector configured to autoscale using a separate analog-to-digital converter for peak detection. In embodiments, the local data collection system is configured to route at least one trigger channel that is raw and buffered into at least one of the multiple inputs. In embodiments, the local data collection system includes at least one delta-sigma analog-to-digital converter that is configured to increase input oversampling rates to reduce sampling rate outputs and to minimize anti-aliasing filter requirements. In embodiments, the distributed CPLD chips each dedicated to the data bus for logic control of the multiple multiplexing units and the multiple data acquisition units includes as high-frequency crystal clock reference configured to be divided by at least one of the distributed CPLD chips for at least one delta-sigma analog-to-digital converter to achieve lower sampling rates without digital resampling.

In embodiments, the local data collection system is configured to obtain long blocks of data at a single relatively high-sampling rate as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units each having an onboard card set configured to store calibration information and maintenance history of a data acquisition unit in which the onboard card set is located. In embodiments, the local data collection system is configured to plan data acquisition routes based on hierarchical templates.

In embodiments, the local data collection system is configured to manage data collection bands. In embodiments, the data collection bands define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system is configured to create data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the local data collection system includes a graphical user interface ("GUI") system configured to manage the data collection bands. In embodiments, the GUI system includes an expert system diagnostic tool. In embodiments, the platform includes cloud-based, machine pattern analysis of state information from multiple sensors to provide anticipated state information for the industrial environment. In embodiments, the platform is configured to provide self-organization of data pools based on at least one of the utilization metrics and yield metrics. In embodiments, the platform includes a self-organized swarm of industrial data collectors. In embodiments, the local data collection system includes a wearable haptic user interface for an industrial sensor data collector with at least one of vibration, heat, electrical, and sound outputs.

In embodiments, multiple inputs of the crosspoint switch include a third input connected to the second

514

sensor and a fourth input connected to the second sensor. The first sensor signal is from a single-axis sensor at an unchanging location associated with the first machine. In embodiments, the second sensor is a three-axis sensor. In embodiments, the local data collection system is configured to record gap-free digital waveform data simultaneously from at least the first input, the second input, the third input, and the fourth input. In embodiments, the platform is configured to determine a change in relative phase based on the simultaneously recorded gap-free digital waveform data. In embodiments, the second sensor is configured to be movable to a plurality of positions associated with the first machine while obtaining the simultaneously recorded gap-free digital waveform data. In embodiments, multiple outputs of the crosspoint switch include a third output and fourth output. The second, third, and fourth outputs are assigned together to a sequence of tri-axial sensors each located at different positions associated with the machine. In embodiments, the platform is configured to determine an operating deflection shape based on the change in relative phase and the simultaneously recorded gap-free digital waveform data.

In embodiments, the unchanging location is a position associated with the rotating shaft of the first machine. In embodiments, tri-axial sensors in the sequence of the tri-axial sensors are each located at different positions on the first machine but are each associated with different bearings in the machine. In embodiments, tri-axial sensors in the sequence of the tri-axial sensors are each located at similar positions associated with similar bearings but are each associated with different machines. In embodiments, the local data collection system is configured to obtain the simultaneously recorded gap-free digital waveform data from the first machine while the first machine and a second machine are both in operation. In embodiments, the local data collection system is configured to characterize a contribution from the first machine and the second machine in the simultaneously recorded gap-free digital waveform data from the first machine. In embodiments, the simultaneously recorded gap-free digital waveform data has a duration that is in excess of one minute.

In embodiments, a method of monitoring a machine having at least one shaft supported by a set of bearings includes monitoring a first data channel assigned to a single-axis sensor at an unchanging location associated with the machine. The method includes monitoring second, third, and fourth data channels each assigned to an axis of a three-axis sensor. The method includes recording gap-free digital waveform data simultaneously from all of the data channels while the machine is in operation and determining a change in relative phase based on the digital waveform data.

In embodiments, the tri-axial sensor is located at a plurality of positions associated with the machine while obtaining the digital waveform. In embodiments, the second, third, and fourth channels are assigned together to a sequence of tri-axial sensors each located at different positions associated with the machine. In embodiments, the data is received from all of the sensors simultaneously. In embodiments, the method includes determining an operating deflection shape based on the change in relative phase information and the waveform data. In embodiments, the unchanging location is a position associated with the shaft of the machine. In embodiments, the tri-axial sensors in the sequence of the tri-axial sensors are each located at different positions and are each associated with different bearings in the machine. In embodiments, the unchanging location is a position associated with the shaft of the machine. The tri-axial sensors in the sequence of the tri-axial sensors are each located at different positions and are each associated with different bearings that support the shaft in the machine.

In embodiments, the method includes monitoring the first data channel assigned to the single-axis sensor at an unchanging location located on a second machine. The method includes monitoring the second, the third, and the fourth data channels, each assigned to the axis of a three-axis sensor that is located at the position associated with the second machine. The method also includes recording gap-free digital waveform data simultaneously from all of the data channels from the second machine while both of the machines are in operation. In embodiments, the method includes characterizing the contribution from each of the machines in the gap-free digital waveform data simultaneously from the second machine.

In embodiments, a method for data collection, processing, and utilization of signals with a platform monitoring at least a first element in a first machine in an industrial environment includes obtaining, automatically with a computing environment, at least a first sensor signal and a second sensor signal with a local data collection system that monitors at least the first machine. The method includes connecting a first input of a crosspoint switch of the local data collection system to a first sensor and a second input of the crosspoint switch to a second sensor in the local data collection system. The method includes switching between a condition in which a first output of the crosspoint switch alternates between delivery of at least the first sensor signal and the second sensor signal and a condition in which there is simultaneous delivery of the first sensor signal from the first output and the second sensor signal from a second output of the crosspoint switch. The method also includes switching off unassigned outputs of the crosspoint switch into a high-impedance state.

In embodiments, the first sensor signal and the second sensor signal are continuous vibration data from the industrial environment. In embodiments, the second sensor in the local data collection system is connected to the first machine. In embodiments, the second sensor in the local data collection system is connected to a second machine in the industrial environment. In embodiments, the method includes comparing, automatically with the computing environment, relative phases of the first and second sensor signals. In embodiments, the first sensor is a single-axis sensor and the second sensor is a three-axis sensor. In embodiments, at least the first input of the crosspoint switch includes internet protocol front-end signal conditioning for improved signal-to-noise ratio.

In embodiments, the method includes continuously monitoring at least a third input of the crosspoint switch with an alarm having a pre-determined trigger condition when the third input is unassigned to any of multiple outputs on the crosspoint switch. In embodiments, the local data collection system includes multiple multiplexing units and multiple data acquisition units receiving multiple data streams from multiple machines in the industrial environment. In embodiments, the local data collection system includes distributed CPLD chips each dedicated to a data bus for logic control of the multiple multiplexing units and the multiple data acquisition units that receive the multiple data streams from the multiple machines in the industrial environment. In embodiments, the local data collection system provides high-amperage input capability using solid state relays.

In embodiments, the method includes powering down at least one of an analog sensor channel and a component board of the local data collection system. In embodiments, the local data collection system includes an external voltage reference for an A/D zero reference that is independent of the voltage of the first sensor and the second sensor. In embodiments, the local data collection system includes a phase-lock loop band-pass tracking filter that obtains slow-speed RPMs and phase information. In embodiments, the method includes digitally deriving phase using on-board timers relative to at least one trigger channel and at least one of multiple inputs on the crosspoint switch.

In embodiments, the method includes auto-scaling with a peak-detector using a separate analog-to-digital converter for peak detection. In embodiments, the method includes routing at least one trigger channel that is raw and buffered into at least one of multiple inputs on the crosspoint switch. In embodiments, the method includes increasing input oversampling rates with at least one delta-sigma analog-to-digital converter to reduce sampling rate outputs and to minimize anti-aliasing filter requirements. In embodiments, the distributed CPLD chips are each dedicated to the data bus for logic control of the multiple multiplexing units and the multiple data acquisition units and each include a high-frequency crystal clock reference divided by at least one of the distributed CPLD chips for at least one delta-sigma analog-to-digital converter to achieve lower sampling rates without digital resampling. In embodiments, the method includes obtaining long blocks of data at a single relatively high-sampling rate with the local data collection system as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units and each data acquisition unit has an onboard card set that stores calibration information and maintenance history of a data acquisition unit in which the onboard card set is located.

In embodiments, the method includes planning data acquisition routes based on hierarchical templates associated with at least the first element in the first machine in the industrial environment. In embodiments, the local data collection system manages data collection bands that define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system creates data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the method includes controlling a GUI system of the local data collection system to manage the data collection bands. The GUI system includes an expert system diagnostic tool. In embodiments, the computing environment of the platform includes cloud-based, machine pattern analysis of state information from multiple sensors to provide anticipated state information for the industrial environment. In embodiments, the computing environment of the platform provides self-organization of data pools based on at least one of the utilization metrics and yield metrics. In embodiments, the computing environment of the platform includes a self-organized swarm of industrial data collectors. In embodiments, each of multiple inputs of the crosspoint switch is individually assignable to any of multiple outputs of the crosspoint switch.

Methods and systems described herein for industrial machine sensor data streaming, collection, processing, and storage may be configured to operate and integrate with existing data collection, processing and storage systems and may include a method for capturing a plurality of streams of sensed data from sensors deployed to monitor aspects of an industrial machine associated with at least one moving part of the machine; at least one of the streams contains a plurality of frequencies of data. The method may include identifying a subset of data in at least one of the plurality of streams that corresponds to data representing at least one predefined frequency. The at least one predefined frequency is represented by a set of data collected from alternate sensors deployed to monitor aspects of the industrial machine associated with the at least one moving part of the machine. The method may further include processing the identified data with a data processing facility that processes the identified data with an algorithm configured to be applied to the set of data collected from alternate sensors. Lastly, the method may include storing the at least one of the streams of data, the identified subset of data, and a result of processing the identified data in an electronic data set.

Methods and systems described herein for industrial machine sensor data streaming, collection, processing, and storage may be configured to operate and integrate with existing data collection, processing, and storage systems and may include a method for applying data captured from sensors deployed to monitor aspects of an industrial machine associated with at least one moving part of the machine. The data is captured with predefined lines of resolution covering a predefined frequency range and is sent to a frequency matching facility that identifies a subset of data streamed from other sensors deployed to monitor aspects of the industrial machine associated with at least one moving part of the machine. The streamed data includes a plurality of lines of resolution and frequency ranges. The subset of data identified corresponds to the lines of resolution and predefined frequency range. This method may include storing the subset of data in an electronic data record in a format that corresponds to a format of the data captured with predefined lines of resolution and signaling to a data processing facility the presence of the stored subset of data. This method may, optionally, include processing the subset of data with at least one set of algorithms, models and pattern recognizers that corresponds to algorithms, models and pattern recognizers associated with processing the data captured with predefined lines of resolution covering a predefined frequency range.

Methods and systems described herein for industrial machine sensor data streaming, collection, processing, and storage may be configured to operate and integrate with existing data collection, processing and storage systems and may include a method for identifying a subset of streamed sensor data, the sensor data captured from sensors deployed to monitor aspects of an industrial machine associated with at least one moving part of the machine, the subset of streamed sensor data at predefined lines of resolution for a predefined frequency range, and establishing a first logical route for communicating electronically between a first computing facility performing the identifying and a second computing facility, wherein identified subset of the streamed sensor data is communicated exclusively over the established first logical route when communicating the subset of streamed sensor data from the first facility to the second facility. This method may further include establishing a second logical route for communicating electronically between the first computing facility and the second computing facility for at least one portion of the streamed sensor data that is not the identified subset. Additionally, this method may further include establishing a third logical route for communicating electronically between the first computing facility and the second computing facility for at least one portion of the streamed sensor data that includes the identified subset and at least one other portion of the data not represented by the identified subset.

Methods and systems described herein for industrial machine sensor data streaming, collection, processing, and storage may be configured to operate and integrate with existing data collection, processing and storage systems and may include a first data sensing and processing system that captures first data from a first set of sensors deployed to monitor aspects of an industrial machine associated with at least one moving part of the machine, the first data covering a set of lines of resolution and a frequency range. This system may include a second data sensing and processing system that captures and streams a second set of data from a second set of sensors deployed to monitor aspects of the industrial machine associated with at least one moving part of the machine, the second data covering a plurality of lines of resolution that includes the set of lines of resolution and a plurality of frequencies that includes the frequency range. The system may enable selecting a portion of the second data that corresponds to the set of lines of resolution and the frequency range of the first data, and processing the selected portion of the second data with the first data sensing and processing system.

Methods and systems described herein for industrial machine sensor data streaming, collection, processing, and storage may be configured to operate and integrate with existing data collection, processing and storage systems and may include a method for automatically processing a portion of a stream of sensed data. The sensed data is received from a first set of sensors deployed to monitor aspects of an industrial machine associated with at least one moving part of the machine. The sensed data is in response to an electronic data structure that facilitates extracting a subset of the stream of sensed data that corresponds to a set of sensed data received from a second set of sensors deployed to monitor the aspects of the industrial machine associated with the at least one moving part of the machine. The set of sensed data is constrained to a frequency range. The stream of sensed data includes a range of frequencies that exceeds the frequency range of the set of sensed data, the processing comprising executing an algorithm on a portion of the stream of sensed data that is constrained to the frequency range of the set of sensed data, the algorithm configured to process the set of sensed data.

Methods and systems described herein for industrial machine sensor data streaming, collection, processing, and storage may be configured to operate and integrate with existing data collection, processing and storage systems and may include a method for receiving first data from sensors deployed to monitor aspects of an industrial machine associated with at least one moving part of the machine. This method may further include detecting at least one of a frequency range and lines of resolution represented by the first data; receiving a stream of data from sensors deployed to monitor the aspects of the industrial machine associated with the at least one moving part of the machine. The stream of data includes: (1) a plurality of frequency ranges and a plurality of lines of resolution that exceeds the frequency range and the lines of resolution represented by the first data; (2) a set of data extracted from the stream of data that corresponds to at least one of the frequency range and the lines of resolution represented by the first data; and (3) the extracted set of data which is processed with a data processing algorithm that is configured to process data within the frequency range and within the lines of resolution of the first data.

In embodiments, a monitoring system for data collection in an industrial drilling environment may comprise a data collector communicatively coupled to a plurality of input channels and to a network infrastructure, wherein the data collector is sensitive to a change to a parameter of the network infrastructure within the industrial drilling environment; a data storage structured to store a plurality of collector routes and collected data that correspond to the plurality of input channels, wherein the plurality of collector routes each comprise a different data collection routine; a data acquisition circuit structured to interpret a plurality of detection values from the collected data, each of the plurality of detection values corresponding to at least one of the plurality of input channels; and a data analysis circuit structured to analyze the collected data from the plurality of input channels and evaluate a selected collection routine of the data collector based on the analyzed collected data, wherein the selected collection routine is switched to a second collection routine due to the data analysis circuit detecting a change to a network infrastructure parameter. In embodiments, the detected change to the network infrastructure parameter may be a change in network bandwidth or a change in quality of service. The industrial drilling environment may include a plurality of drilling machines across which the network infrastructure is communicatively connected. The detected change to the network infrastructure parameter may be a change to distributed equipment functionality across the industrial drilling environment. The distributed equipment functionality may include drilling equipment, such as where the distributed equipment functionality includes network infrastructure equipment. The plurality of input channels may include a first input and a second input connected to a first sensor and a second sensor, where the first input and second input are multiplex switchable to a plurality of output channels comprising a first output and a second output. The plurality of input channels may be connected to a sensor, the sensor measuring an operational parameter from an industrial drilling component, wherein sensor is a tri-axial sensor connected to multiple input channels for monitoring different positions associated with one of a plurality of industrial drilling components. One of the plurality of input channels may provide for a gap-free digital waveform from which the data analysis circuit detects the change to the network infrastructure parameter. The data analysis circuit may analyze a first and a second of the plurality of input channels for a relative phase determination from which the data analysis circuit detects the change to the network infrastructure parameter. The data analysis circuit may provide for band-pass tracking associated with distributed equipment functionality from which the data analysis circuit detects the change to the network infrastructure parameter. The data storage may be structured as a distributed data storage across a plurality of locations within the industrial drilling environment. The collected data may be communicated from the plurality of input channels through the network infrastructure along a data communication path, such as where the data communication path is stored in the data storage. The plurality of input channels may be connected to a subset of a plurality of sensors, and the selected collection routing is switched to change data collection from a first set of the plurality of sensors to a second set of the plurality of sensors.

In embodiments, a computer-implemented method for monitoring data collection in an industrial drilling environment may comprise providing a data collector communicatively coupled to a plurality of input channels and to a network infrastructure, wherein the data collector is sensitive to a change to a parameter of the network infrastructure within the industrial drilling environment; providing a data storage structured to store a plurality of collector routes and collected data that correspond to the plurality of input channels, wherein the plurality of collector routes each comprise a different data collection routine; providing a data acquisition circuit structured to interpret a plurality of detection values from the collected data, each of the plurality of detection values corresponding to at least one of the plurality of input channels; and providing a data analysis circuit structured to analyze the collected data from the plurality of input channels and evaluate a selected collection routine of the data collector based on the analyzed collected data, wherein the selected collection routine is switched to a second collection routine due to the data analysis circuit detecting a change to a network infrastructure parameter. In embodiments, the detected change to the network infrastructure parameter may be a change in network bandwidth, a change in quality of service, and the like. The industrial drilling environment may include a plurality of drilling machines across which the network infrastructure is communicatively connected.

In embodiments, a monitoring apparatus for data collection in an industrial drilling environment may comprise a data collector component communicatively coupled to a plurality of input channels and to a network infrastructure, wherein the data collector is sensitive to a change to a parameter of the network infrastructure within the industrial drilling environment; a data storage component structured to store a plurality of collector routes and collected data that correspond to the plurality of input channels, wherein the plurality of collector routes each comprise a different data collection routine; a data acquisition component structured to interpret a plurality of detection values from the collected data, each of the plurality of detection values corresponding to at least one of the plurality of input channels; and a data analysis component structured to analyze the collected data from the plurality of input channels and evaluate a selected collection routine of the data collector based on the analyzed collected data, wherein the selected collection routine is switched to a second collection routine due to the data analysis component detecting a change to a network infrastructure parameter. In embodiments, the detected change to the network infrastructure parameter may be a change in network bandwidth or a change in quality of service. The industrial drilling environment may include a plurality of drilling machines across which the network infrastructure is communicatively connected.

Methods and systems are disclosed herein for continuous ultrasonic monitoring, including providing continuous ultrasonic monitoring of rotating elements and bearings of an energy production facility; for cloud-based systems including machine pattern recognition based on the fusion of remote, analog industrial sensors or machine pattern analysis of state information from multiple analog industrial sensors to provide anticipated state information for an industrial system; for on-device sensor fusion and data storage for industrial IoT devices, including on-device sensor fusion and data storage for an Industrial IoT device, where data from multiple sensors are multiplexed at the device for storage of a fused data stream; and for self-organizing systems including a self-organizing data marketplace for industrial IoT data, including a self-organizing data marketplace for industrial IoT data, where available data elements are organized in the marketplace for consumption by consumers based on training a self-organizing facility with a training set and feedback from measures of marketplace success, for self-organizing data pools, including self-organization of data pools based on utilization and/or yield metrics, including utilization and/or yield metrics that are tracked for a plurality of data pools, a self-organized swarm of industrial data collectors, including a self-organizing swarm of industrial data collectors that organize among themselves to optimize data collection based on the capabilities and conditions of the members of the swarm, a self-organizing collector, including a self-organizing, multi-sensor data collector that can optimize data collection, power and/or yield based on conditions in its environment, a self-organizing storage for a multi-sensor data collector, including self-organizing storage for a multi-sensor data collector for industrial sensor data, a self-organizing network coding for a multi-sensor data network, including self-organizing network coding for a data network that transports data from multiple sensors in an industrial data collection environment.

Methods and systems are disclosed herein for training artificial intelligence ("AI") models based on industry-specific feedback, including training an AI model based on industry-specific feedback that reflects a measure of utilization, yield, or impact, where the AI model operates on sensor data from an industrial environment; for an industrial IoT distributed ledger, including a distributed ledger supporting the tracking of transactions executed in an automated data marketplace for industrial IoT data; for a network-sensitive collector, including a network condition-sensitive, self-organizing, multi-sensor data collector that can optimize based on bandwidth, quality of service, pricing, and/or other network conditions; for a remotely organized universal data collector that can power up and down sensor interfaces based on need and/or conditions identified in an industrial data collection environment; and for a haptic or multi-sensory user interface, including a wearable haptic or multi-sensory user interface for an industrial sensor data collector, with vibration, heat, electrical, and/or sound outputs.

Methods and systems are disclosed herein for a presentation layer for augmented reality and virtual reality (AR/VR) industrial glasses, where heat map elements are presented based on patterns and/or parameters in collected data; and for condition-sensitive, self-organized tuning of AR/VR interfaces based on feedback metrics and/or training in industrial environments.

In embodiments, a system for data collection, processing, and utilization of signals from at least a first element in a first machine in an industrial environment includes a platform including a computing environment connected to a local data collection system having at least a first sensor signal and a second sensor signal obtained from at least the first machine in the industrial environment. The system includes a first sensor in the local data collection system configured to be connected to the first machine and a second sensor in the local data collection system. The system further includes a cross-point switch in the local data collection system having multiple inputs and multiple outputs including a first input connected to the first sensor and a second input connected to the second sensor. Throughout the present disclosure, wherever a crosspoint switch, multiplexer (MUX) device, or other multiple-input multiple-output data collection or communication device is described, any multi-sensor acquisition device is also contemplated herein. In certain embodiments, a multi-sensor acquisition device includes one or more channels configured for, or compatible with, an analog sensor input. The multiple outputs include a first output and second output configured to be switchable between a condition in which the first output is configured to switch between delivery of the first sensor signal and the second sensor signal and a condition in which there is simultaneous delivery of the first sensor signal from the first output and the second sensor signal from the second output. Each of multiple inputs is configured to be individually assigned to any of the multiple outputs, or combined in any subsets of the inputs to the outputs. Unassigned outputs are configured to be switched off, for example by producing a high-impedance state.

In embodiments, the first sensor signal and the second sensor signal are continuous vibration data about the industrial environment. In embodiments, the second sensor in the local data collection system is configured to be connected to the first machine. In embodiments, the second sensor in the local data collection system is configured to be connected to a second machine in the industrial environment. In embodiments, the computing environment of the platform is configured to compare relative phases of the first and second sensor signals. In embodiments, the first sensor is a single-axis sensor and the second sensor is a three-axis sensor. In embodiments, at least one of the multiple inputs of the crosspoint switch includes internet protocol, front-end signal conditioning, for improved signal-to-noise ratio. In embodiments, the crosspoint switch includes a third input that is configured with a continuously monitored alarm having a pre-determined trigger condition when the third input is unassigned to or undetected at any of the multiple outputs.

In embodiments, the local data collection system includes multiple multiplexing units and multiple data acquisition units receiving multiple data streams from multiple machines in the industrial environment. In embodiments, the local data collection system includes distributed complex programmable hardware device ("CPLD") chips each dedicated to a data bus for logic control of the multiple multiplexing units and the multiple data acquisition units that receive the multiple data streams from the multiple machines in the industrial environment. In embodiments, the local data collection system is configured to provide high-amperage input capability using solid state relays. In embodiments, the local data collection system is configured to power-down at least one of an analog sensor channel and a component board.

In embodiments, the local data collection system includes a phase-lock loop band-pass tracking filter configured to obtain slow-speed revolutions per minute ("RPMs") and phase information. In embodiments, the local data collection system is configured to digitally derive phase using on-board timers relative to at least one trigger channel and at least one of the multiple inputs. In embodiments, the local data collection system includes a peak-detector configured to autoscale using a separate analog-to-digital converter for peak detection. In embodiments, the local data collection system is configured to route at least one trigger channel that is raw and buffered into at least one of the multiple inputs. In embodiments, the local data collection system includes at least one delta-sigma analog-to-digital converter that is configured to increase input oversampling rates to reduce sampling rate outputs and to minimize anti-aliasing filter requirements. In embodiments, the distributed CPLD chips each dedicated to the data bus for logic control of the multiple multiplexing units and the multiple data acquisition units includes as high-frequency crystal clock reference configured to be divided by at least one of the distributed CPLD chips for at least one delta-sigma analog-to-digital converter to achieve lower sampling rates without digital resampling.

In embodiments, the local data collection system is configured to obtain long blocks of data at a single relatively high-sampling rate as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units each having an onboard card set configured to store calibration information and maintenance history of a data acquisition unit in which the onboard card set is located. In embodiments, the local data collection system is configured to plan data acquisition routes based on hierarchical templates.

In embodiments, the local data collection system is configured to manage data collection bands. In embodiments, the data collection bands define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system is configured to create data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the local data collection system includes a graphical user interface ("GUI") system configured to manage the data collection bands. In embodiments, the GUI system includes an expert system diagnostic tool. In embodiments, the platform includes cloud-based, machine pattern analysis of state information from multiple sensors to provide anticipated state information for the industrial environment. In embodiments, the platform is configured to provide self-organization of data pools based on at least one of the utilization metrics and yield metrics. In embodiments, the platform includes a self-organized swarm of industrial data collectors. In embodiments, the local data collection system includes a wearable haptic user interface for an industrial sensor data collector with at least one of vibration, heat, electrical, and sound outputs.

In embodiments, multiple inputs of the crosspoint switch include a third input connected to the second sensor and a fourth input connected to the second sensor. The first sensor signal is from a single-axis sensor at an unchanging location associated with the first machine. In embodiments, the second sensor is a three-axis sensor. In embodiments, the local data collection system is configured to record gap-free digital waveform data simultaneously from at least the first input, the second input, the third input, and the fourth input. In embodiments, the platform is configured to determine a change in relative phase based on the simultaneously recorded gap-free digital waveform data. In embodiments, the second sensor is configured to be movable to a plurality of positions associated with the first machine while obtaining the simultaneously recorded gap-free digital waveform data. In embodiments, multiple outputs of the crosspoint switch include a third output and fourth output. The second, third, and fourth outputs are assigned together to a sequence of tri-axial sensors each located at different positions associated with the machine. In embodiments, the platform is configured to determine an operating deflection shape based on the change in relative phase and the simultaneously recorded gap-free digital waveform data.

In embodiments, the unchanging location is a position associated with the rotating shaft of the first machine. In embodiments, tri-axial sensors in the sequence of the tri-axial sensors are each located at different positions on the first machine but are each associated with different bearings in the machine. In embodiments, tri-axial sensors in the sequence of the tri-axial sensors are each located at similar positions associated with similar bearings but are each associated with different machines. In embodiments, the local data collection system is configured to obtain the simultaneously recorded gap-free digital waveform data from the first machine while the first machine and a second machine are both in operation. In embodiments, the local data collection system is configured to characterize a contribution from the first machine and the second machine in the simultaneously recorded gap-free digital waveform data from the first machine. In embodiments, the simultaneously recorded gap-free digital waveform data has a duration that is in excess of one minute.

In embodiments, a method of monitoring a machine having at least one shaft supported by a set of bearings includes monitoring a first data channel assigned to a single-axis sensor at an unchanging location associated with the machine. The method includes monitoring second, third, and fourth data channels each assigned to an axis of a three-axis sensor. The method includes recording gap-free digital waveform data simultaneously from all of the data channels while the machine is in operation and determining a change in relative phase based on the digital waveform data.

In embodiments, the tri-axial sensor is located at a plurality of positions associated with the machine while obtaining the digital waveform. In embodiments, the second, third, and fourth channels are assigned together to a sequence of tri-axial sensors each located at different positions associated with the machine. In embodiments, the data is received from all of the sensors simultaneously. In embodiments, the method includes determining an operating deflection shape based on the change in relative phase information and the waveform data. In embodiments, the unchanging location is a position associated with the shaft of the machine. In embodiments, the tri-axial sensors in the sequence of the tri-axial sensors are each located at different positions and are each associated with different bearings in the machine. In embodiments, the unchanging location is a position associated with the shaft of the machine. The tri-axial sensors in the sequence of the tri-axial sensors are each located at different positions and are each associated with different bearings that support the shaft in the machine.

In embodiments, the method includes monitoring the first data channel assigned to the single-axis sensor at an unchanging location located on a second machine. The method includes monitoring the second, the third, and the fourth data channels, each assigned to the axis of a three-axis sensor that is located at the position associated with the second machine. The method also includes recording gap-free digital waveform data simultaneously from all of the data channels from the second machine while both of the machines are in operation. In embodiments, the method includes characterizing the contribution from each of the machines in the gap-free digital waveform data simultaneously from the second machine.

In embodiments, a method for data collection, processing, and utilization of signals with a platform monitoring at least a first element in a first machine in an industrial environment includes obtaining, automatically with a computing environment, at least a first sensor signal and a second sensor signal with a local data collection system that monitors at least the first machine. The method includes connecting a first input of a crosspoint switch of the local data collection system to a first sensor and a second input of the crosspoint switch to a second sensor in the local data collection system. The method includes switching between a condition in which a first output of the crosspoint switch alternates between delivery of at least the first sensor signal and the second sensor signal and a condition in which there is simultaneous delivery of the first sensor signal from the first output and the second sensor signal from a second output of the crosspoint switch. The method also includes switching off unassigned outputs of the crosspoint switch into a high-impedance state.

In embodiments, the first sensor signal and the second sensor signal are continuous vibration data from the industrial environment. In embodiments, the second sensor in the local data collection system is connected to the first machine. In embodiments, the second sensor in the local data collection system is connected to a second machine in the industrial environment. In embodiments, the method includes comparing, automatically with the computing environment, relative phases of the first and second sensor signals. In embodiments, the first sensor is a single-axis sensor and the second sensor is a three-axis sensor. In embodiments, at least the first input of the crosspoint switch includes internet protocol front-end signal conditioning for improved signal-to-noise ratio.

In embodiments, the method includes continuously monitoring at least a third input of the crosspoint switch with an alarm having a pre-determined trigger condition when the third input is unassigned to any of multiple outputs on the crosspoint switch. In embodiments, the local data collection system includes multiple multiplexing units and multiple data acquisition units receiving multiple data streams from multiple machines in the industrial environment. In embodiments, the local data collection system includes distributed CPLD chips each dedicated to a data bus for logic control of the multiple multiplexing units and the multiple data acquisition units that receive the multiple data streams from the multiple machines in the industrial environment. In embodiments, the local data collection system provides high-amperage input capability using solid state relays.

In embodiments, the method includes powering down at least one of an analog sensor channel and a component board of the local data collection system. In embodiments, the local data collection system includes an external voltage reference for an A/D zero reference that is independent of the voltage of the first sensor and the second sensor. In embodiments, the local data collection system includes a phase-lock loop band-pass tracking filter that obtains slow-speed RPMs and phase information. In embodiments, the method includes digitally deriving phase using on-board timers relative to at least one trigger channel and at least one of multiple inputs on the crosspoint switch.

In embodiments, the method includes autoscaling with a peak-detector using a separate analog-to-digital converter for peak detection. In embodiments, the method includes routing at least one trigger channel that is raw and buffered into at least one of multiple inputs on the crosspoint switch. In embodiments, the method includes increasing input oversampling rates with at least one delta-sigma analog-to-digital converter to reduce sampling rate outputs and to minimize anti-aliasing filter requirements. In embodiments, the distributed CPLD chips are each dedicated to the data bus for logic control of the multiple multiplexing units and the multiple data acquisition units and each include a high-frequency crystal clock reference divided by at least one of the distributed CPLD chips for at least one delta-sigma analog-to-digital converter to achieve lower sampling rates without digital resampling. In embodiments, the method includes obtaining long blocks of data at a single relatively high-sampling rate with the local data collection system as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units and each data acquisition unit has an onboard card set that stores calibration information and maintenance history of a data acquisition unit in which the onboard card set is located.

In embodiments, the method includes planning data acquisition routes based on hierarchical templates associated with at least the first element in the first machine in the industrial environment. In embodiments, the local data collection system manages data collection bands that define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system creates data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the method includes controlling a GUI system of the local data collection system to manage the data collection bands. The GUI system includes an expert system diagnostic tool. In embodiments, the computing environment of the platform includes cloud-based, machine pattern analysis of state information from multiple sensors to provide anticipated state information for the industrial environment. In embodiments, the computing environment of the platform provides self-organization of data pools based on at least one of the utilization metrics and yield metrics. In embodiments, the computing environment of the platform includes a self-organized swarm of industrial data collectors. In embodiments, each of multiple inputs of the crosspoint switch is individually assignable to any of multiple outputs of the crosspoint switch.

Methods and systems described herein for industrial machine sensor data streaming, collection, processing, and storage may be configured to operate and integrate with existing data collection, processing and storage systems and may include a method for capturing a plurality of streams of sensed data from sensors deployed to monitor aspects of an industrial machine associated with at least one moving part of the machine; at least one of the streams contains a plurality of frequencies of data. The method may include identifying a subset of data in at least one of the plurality of streams that corresponds to data representing at least one predefined frequency. The at least one predefined frequency is represented by a set of data collected from alternate sensors deployed to monitor aspects of the industrial machine associated with the at least one moving part of the machine. The method may further include processing the identified data with a data processing facility that processes the identified data with an algorithm configured to be applied to the set of data collected from alternate sensors. Lastly, the method may include storing the at least one of the streams of data, the identified subset of data, and a result of processing the identified data in an electronic data set.

Methods and systems described herein for industrial machine sensor data streaming, collection, processing, and storage may be configured to operate and integrate with existing data collection, processing, and storage systems and may include a method for applying data captured from sensors deployed to monitor aspects of an industrial machine associated with at least one moving part of the machine. The data is captured with predefined lines of resolution covering a predefined frequency range and is sent to a frequency matching facility that identifies a subset of data streamed from other sensors deployed to monitor aspects of the industrial machine associated with at least one moving part of the machine. The streamed data includes a plurality of lines of resolution and frequency ranges. The subset of data identified corresponds to the lines of resolution and predefined frequency range. This method may include storing the subset of data in an electronic data record in a format that corresponds to a format of the data captured with predefined lines of resolution and signaling to a data processing facility the presence of the stored subset of data. This method may, optionally, include processing the subset of data with at least one set of algorithms, models and pattern recognizers that corresponds to algorithms, models and pattern recognizers associated with processing the data captured with predefined lines of resolution covering a predefined frequency range.

Methods and systems described herein for industrial machine sensor data streaming, collection, processing, and storage may be configured to operate and integrate with existing data collection, processing and storage systems and may include a method for identifying a subset of streamed sensor data, the sensor data captured from sensors deployed to monitor aspects of an industrial machine associated with at least one moving part of the machine, the subset of streamed sensor data at predefined lines of resolution for a predefined frequency range, and establishing a first logical route for communicating electronically between a first computing facility performing the identifying and a second computing facility, wherein identified subset of the streamed sensor data is communicated exclusively over the established first logical route when communicating the subset of streamed sensor data from the first facility to the second facility. This method may further include establishing a second logical route for communicating electronically between the first computing facility and the second computing facility for at least one portion of the streamed sensor data that is not the identified subset. Additionally, this method may further include establishing a third logical route for communicating electronically between the first computing facility and the second computing facility for at least one portion of the streamed sensor data that includes the identified subset and at least one other portion of the data not represented by the identified subset.

Methods and systems described herein for industrial machine sensor data streaming, collection, processing, and storage may be configured to operate and integrate with existing data collection, processing and storage systems and may include a first data sensing and processing system that captures first data from a first set of sensors deployed to monitor aspects of an industrial machine associated with at least one moving part of the machine, the first data covering a set of lines of resolution and a frequency range. This system may include a second data sensing and processing system that captures and streams a second set of data from a second set of sensors deployed to monitor aspects of the industrial machine associated with at least one moving part of the machine, the second data covering a plurality of lines of resolution that includes the set of lines of resolution and a plurality of frequencies that includes the frequency range. The system may enable selecting a portion of the second data that corresponds to the set of lines of resolution and the frequency range of the first data, and processing the selected portion of the second data with the first data sensing and processing system.

Methods and systems described herein for industrial machine sensor data streaming, collection, processing, and storage may be configured to operate and integrate with existing data collection, processing and storage systems and may include a method for automatically processing a portion of a stream of sensed data. The sensed data is received from a first set of sensors deployed to monitor aspects of an industrial machine associated with at least one moving part of the machine. The sensed data is in response to an electronic data structure that facilitates extracting a subset of the stream of sensed data that corresponds to a set of sensed data received from a second set of sensors deployed to monitor the aspects of the industrial machine associated with the at least one moving part of the machine. The set of sensed data is constrained to a frequency range. The stream of sensed data includes a range of frequencies that exceeds the frequency range of the set of sensed data, the processing comprising executing an algorithm on a portion of the stream of sensed data that is constrained to the frequency range of the set of sensed data, the algorithm configured to process the set of sensed data.

Methods and systems described herein for industrial machine sensor data streaming, collection, processing, and storage may be configured to operate and integrate with existing data collection, processing and storage systems and may include a method for receiving first data from sensors deployed to monitor aspects of an industrial machine associated with at least one moving part of the machine. This method may further include detecting at least one of a frequency range and lines of resolution represented by the first data; receiving a stream of data from sensors deployed to monitor the aspects of the industrial machine associated with the at least one moving part of the machine. The stream of data includes: (1) a plurality of frequency ranges and a plurality of lines of resolution that exceeds the frequency range and the lines of resolution represented by the first data; (2) a set of data extracted from the stream of data that corresponds to at least one of the frequency range and the lines of resolution represented by the first data; and (3) the extracted set of data which is processed with a data processing algorithm that is configured to process data within the frequency range and within the lines of resolution of the first data.

In embodiments, a system for monitoring an oil and gas process may comprise: a data acquisition circuit structured to interpret a plurality of detection values, each of the plurality of detection values corresponding to input received from a detection package, the detection package comprising at least one of a plurality of input sensors, each of the plurality of input sensors operatively coupled to at least one of a plurality of components of an industrial production process; a data analysis circuit structured to analyze a subset of the plurality of detection values to determine a status parameter; and an analysis response circuit structured to adjust the detection package in response to the status parameter, wherein adjusting the detection package comprises at least one operation selected from the operations consisting of: adjusting a sensor range; adjusting a sensor scaling value; adjusting a sensor sampling frequency; activating a sensor; deactivating a sensor;and adjusting a utilized sensor value, the utilized sensor value indicating which sensor from a plurality of available sensors is utilized in the detection package, and wherein the plurality of available sensors have at least one distinct sensing parameter selected from the sensing parameters consisting of: input ranges, sensitivity values, locations, reliability values, duty cycle values, sensor types, and maintenance requirements. In embodiments, the industrial production process may comprise at least one of: a refining process, a drilling process, a wellbore treatment process, or a pipeline transportation process; and wherein the subset of the plurality of detection values comprises at least one parameter of at least one of: a motor, a pump, a compressor, a turbine, or a blower. A data storage circuit may be structured to store at least one of calibration data and maintenance history for at least one of the plurality of input sensors, and wherein the data acquisition circuit is further structured to perform at least one of calibrating at least one of the plurality of input sensors and updating a maintenance history of at least one of the plurality of input sensors. The status parameter may comprise at least one parameter selected from the parameters consisting of: a current state of the industrial production process, a current condition for one of the plurality of components, a current condition for one of the plurality of input sensors, a current process stage, a future state of the industrial production process, a future condition for at least one of the plurality of components, , and a future process stage. The status parameter may comprise at least one parameter selected from the parameters consisting of: a process rate, a process order, an anticipated completion time of the industrial production process, an anticipated life of one of the plurality of components, a process event, a confidence level regarding process quality, a detection/transmission capability of a network communicating at least a portion of the detection values, an achievement of a process goal, an output production rate, an operational efficiency, an operational failure rate, a power efficiency, a power resource status, an identified risk, a temperature for at least one of a time and a location in the industrial production process, a failure prediction, an identified safety issue, an off-nominal process, and an identified maintenance requirement. The data acquisition circuit may be further structured to combine at least two of the plurality of detection values into a single fused detection value. The data analysis circuit may utilize at least one of a neural net or an expert system to determine the status parameter. The data analysis circuit may further comprise a pattern recognition circuit, and wherein the pattern recognition circuit is structured to perform at least one operation selected from the operations consisting of: determining a signal effectiveness of at least one of the plurality of input sensors relative to the status parameter; determining a sensitivity of at least one of the plurality of input sensors relative to the status parameter; determining a predictive confidence of at least one of the plurality of input sensors relative to the status parameter; determining a predictive delay time of at least one of the plurality of input sensors relative to the status parameter; determining a predictive accuracy of at least one of the plurality of input sensors relative to the status parameter; determining a predictive precision of at least one of the plurality of input sensors relative to the status parameter; and updating the pattern recognition operation further in response to external feedback.

In embodiments, a method for monitoring an oil and gas process may comprise: interpreting a plurality of detection values, each of the plurality of detection values corresponding to input received from a detection package comprising at least one of a plurality of input sensors, each of the plurality of input sensors operatively coupled to at least one of a plurality of components of an industrial production process; analyzing a subset of the plurality of detection values to determine a status parameter; and adjusting the detection package in response to the status parameter, wherein adjusting the detection package comprises at least on operation selected from the operations consisting of: adjusting a sensor range; adjusting a sensor scaling value; adjusting a sensor sampling frequency; activating a sensor; deactivating a sensor; and adjusting a utilized sensor value, the utilized sensor value indicating which sensor from a plurality of available sensors is utilized in the detection package, and wherein the plurality of available sensors have at least one distinct sensing parameter selected from the sensing parameters consisting of: input ranges, sensitivity values, locations, reliability values, duty cycle values, sensor types, and maintenance requirements. The method may determine a data storage profile, the data storage profile comprising a data storage plan for the plurality of detection values; and storing at least a portion of the plurality of detection values in response to the data storage profile, such as selectively communicating and storing the at least a portion of the detection values in a plurality of storage locations in response to the data storage profile. The method may selectively communicat and store the at least a portion of the detection values comprises performing at least one operation selected from the operations consisting of: sequentially moving at least a portion of the detection values between storage locations; storing selected portions of the detection values in selected storage locations for selected time periods; providing a time data storage trajectory for at least a portion of the detection values; providing a time domain distribution over which at least a portion of the detection values are to be stored; and providing a location data storage trajectory over which at least a portion of the detection values are to be stored. The method may adjust the data storage profile in response to a network resource value to move a data storage load between a first networked device and a second networked device, wherein the first networked device is communicatively disposed between the second networked device and the detection package in response to at least one of: the network resource value indicating a reduced network capacity; the network resource value indicating an unavailable network; and determining the first networked device comprises sufficient storage capacity to store a selected amount of the portion of the detection values until an expected network capacity increase event. The method may determine a sensor priority value, wherein the determining the sensor priority value comprises at least one operation selected from the operations consisting of: determining a signal effectiveness of at least one of the plurality of input sensors relative to the status parameter; determining a sensitivity of at least one of the plurality of input sensors relative to the status parameter; determining a predictive confidence of at least one of the plurality of input sensors relative to the status parameter; determining a predictive delay time of at least one of the plurality of input sensors relative to the status parameter; determining a predictive accuracy of at least one of the plurality of input sensors relative to the status parameter; and determining a predictive precision of at least one of the plurality of input sensors relative to the status parameter; and wherein the updating the data storage profile is further in response to the sensor priority value. The method may combine two or more of the plurality of detection values from the plurality of detection values into a single fused detection value, wherein the determining the sensor priority value is further in response to the single fused detection value, and wherien the updating the data storage profile is further in response to each of the two or more of the plurality of detection values combined into the single fused detection value.

In embodiments, an apparatus for monitoring an oil and gas process may comprise: a sensor data storage profile component configured to determine a data storage profile, the data storage profile comprising a data storage plan for a plurality of detection values; a data acquisition component configured to interpret the plurality of detection values, each of the plurality of detection values corresponding to input received from a detection package comprising at least one of a plurality of input sensors, each of the plurality of input sensors operatively coupled to at least one of a plurality of components of an industrial production process;a data analysis component configured to analyze a subset of the plurality of detection values to determine a status parameter; a sensor data storage implementation component configured to store at least a portion of the plurality of detection values in response to the data storage profile; and an analysis response component configured to adjust at least one of the detection package and the data storage profile in response to the status parameter. The analysis response component may adjust the detection package by performing at least one operation selected from the operations consisting of: adjusting a sensor range; adjusting a sensor scaling value; adjusting a sensor sampling frequency; activating a sensor; deactivating a sensor; and adjusting a utilized sensor value, the utilized sensor value indicating which sensor from a plurality of available sensors is utilized in the detection package, and wherein the plurality of available sensors have at least one distinct sensing parameter selected from the sensing parameters consisting of: input ranges, sensitivity values, locations, reliability values, duty cycle values, sensor types, and maintenance requirements. The status parameter may comprise at least one of: a sensor state, a process state, and a component state. The data storage profile may further comprise at least one of: a storage location for the at least one of the plurality of detection values; a time data storage trajectory comprising a plurality of time values corresponding to a plurality of storage locations over which the corresponding at least one of the plurality of detection values is to be stored; a time domain distribution over which the at least one of the plurality of detection values is to be stored; and location data storage trajectory comprising a plurality of storage locations over which the at least one of the plurality of detection values is to be stored. The data storage profile comprise a data communication path, and wherein the plurality of detection values are communicated through a network infrastructure along the data communication path.

Methods and systems are disclosed herein for continuous ultrasonic monitoring, including providing continuous ultrasonic monitoring of rotating elements and bearings of an energy production facility; for cloud-based systems including machine pattern recognition based on the fusion of remote, analog industrial sensors or machine pattern analysis of state information from multiple analog industrial sensors to provide anticipated state information for an industrial system; for on-device sensor fusion and data storage for industrial IoT devices, including on-device sensor fusion and data storage for an Industrial IoT device, where data from multiple sensors are multiplexed at the device for storage of a fused data stream; and for self-organizing systems including a self-organizing data marketplace for industrial IoT data, including a self-organizing data marketplace for industrial IoT data, where available data elements are organized in the marketplace for consumption by consumers based on training a self-organizing facility with a training set and feedback from measures of marketplace success, for self-organizing data pools, including self-organization of data pools based on utilization and/or yield metrics, including utilization and/or yield metrics that are tracked for a plurality of data pools, a self-organized swarm of industrial data collectors, including a self-organizing swarm of industrial data collectors that organize among themselves to optimize data collection based on the capabilities and conditions of the members of the swarm, a self-organizing collector, including a self-organizing, multi-sensor data collector that can optimize data collection, power and/or yield based on conditions in its environment, a self-organizing storage for a multi-sensor data collector, including self-organizing storage for a multi-sensor data collector for industrial sensor data, a self-organizing network coding for a multi-sensor data network, including self-organizing network coding for a data network that transports data from multiple sensors in an industrial data collection environment.

Methods and systems are disclosed herein for training artificial intelligence ("AI") models based on industry-specific feedback, including training an AI model based on industry-specific feedback that reflects a measure of utilization, yield, or impact, where the AI model operates on sensor data from an industrial environment; for an industrial IoT distributed ledger, including a distributed ledger supporting the tracking of transactions executed in an automated data marketplace for industrial IoT data; for a network-sensitive collector, including a network condition-sensitive, self-organizing, multi-sensor data collector that can optimize based on bandwidth, quality of service, pricing, and/or other network conditions; for a remotely organized universal data collector that can power up and down sensor interfaces based on need and/or conditions identified in an industrial data collection environment; and for a haptic or multi-sensory user interface, including a wearable haptic or multi-sensory user interface for an industrial sensor data collector, with vibration, heat, electrical, and/or sound outputs.

Methods and systems are disclosed herein for a presentation layer for augmented reality and virtual reality (AR/VR) industrial glasses, where heat map elements are presented based on patterns and/or parameters in collected data; and for condition-sensitive, self-organized tuning of AR/VR interfaces based on feedback metrics and/or training in industrial environments.

In embodiments, a system for data collection, processing, and utilization of signals from at least a first element in a first machine in an industrial environment includes a platform including a computing environment connected to a local data collection system having at least a first sensor signal and a second sensor signal obtained from at least the first machine in the industrial environment. The system includes a first sensor in the local data collection system configured to be connected to the first machine and a second sensor in the local data collection system. The system further includes a cross-point switch in the local data collection system having multiple inputs and multiple outputs including a first input connected to the first sensor and a second input connected to the second sensor. Throughout the present disclosure, wherever a crosspoint switch, multiplexer (MUX) device, or other multiple-input multiple-output data collection or communication device is described, any multi-sensor acquisition device is also contemplated herein. In certain embodiments, a multi-sensor acquisition device includes one or more channels configured for, or compatible with, an analog sensor input. The multiple outputs include a first output and second output configured to be switchable between a condition in which the first output is configured to switch between delivery of the first sensor signal and the second sensor signal and a condition in which there is simultaneous delivery of the first sensor signal from the first output and the second sensor signal from the second output. Each of multiple inputs is configured to be individually assigned to any of the multiple outputs, or combined in any subsets of the inputs to the outputs. Unassigned outputs are configured to be switched off, for example by producing a high-impedance state.

In embodiments, the first sensor signal and the second sensor signal are continuous vibration data about the industrial environment. In embodiments, the second sensor in the local data collection system is configured to be connected to the first machine. In embodiments, the second sensor in the local data collection system is configured to be connected to a second machine in the industrial environment. In embodiments, the computing environment of the platform is configured to compare relative phases of the first and second sensor signals. In embodiments, the first sensor is a single-axis sensor and the second sensor is a three-axis sensor. In embodiments, at least one of the multiple inputs of the crosspoint switch includes internet protocol, front-end signal conditioning, for improved signal-to-noise ratio. In embodiments, the crosspoint switch includes a third input that is configured with a continuously monitored alarm having a pre-determined trigger condition when the third input is unassigned to or undetected at any of the multiple outputs.

In embodiments, the local data collection system includes multiple multiplexing units and multiple data acquisition units receiving multiple data streams from multiple machines in the industrial environment. In embodiments, the local data collection system includes distributed complex programmable hardware device ("CPLD") chips each dedicated to a data bus for logic control of the multiple multiplexing units and the multiple data acquisition units that receive the multiple data streams from the multiple machines in the industrial environment. In embodiments, the local data collection system is configured to provide high-amperage input capability using solid state relays. In embodiments, the local data collection system is configured to power-down at least one of an analog sensor channel and a component board.

In embodiments, the local data collection system includes a phase-lock loop band-pass tracking filter configured to obtain slow-speed revolutions per minute ("RPMs") and phase information. In embodiments, the local data collection system is configured to digitally derive phase using on-board timers relative to at least one trigger channel and at least one of the multiple inputs. In embodiments, the local data collection system includes a peak-detector configured to autoscale using a separate analog-to-digital converter for peak detection. In embodiments, the local data collection system is configured to route at least one trigger channel that is raw and buffered into at least one of the multiple inputs. In embodiments, the local data collection system includes at least one delta-sigma analog-to-digital converter that is configured to increase input oversampling rates to reduce sampling rate outputs and to minimize anti-aliasing filter requirements. In embodiments, the distributed CPLD chips each dedicated to the data bus for logic control of the multiple multiplexing units and the multiple data acquisition units includes as high-frequency crystal clock reference configured to be divided by at least one of the distributed CPLD chips for at least one delta-sigma analog-to-digital converter to achieve lower sampling rates without digital resampling.

In embodiments, the local data collection system is configured to obtain long blocks of data at a single relatively high-sampling rate as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units each having an onboard card set configured to store calibration information and maintenance history of a data acquisition unit in which the onboard card set is located. In embodiments, the local data collection system is configured to plan data acquisition routes based on hierarchical templates.

In embodiments, the local data collection system is configured to manage data collection bands. In embodiments, the data collection bands define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system is configured to create data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the local data collection system includes a graphical user interface ("GUI") system configured to manage the data collection bands. In embodiments, the GUI system includes an expert system diagnostic tool. In embodiments, the platform includes cloud-based, machine pattern analysis of state information from multiple sensors to provide anticipated state information for the industrial environment. In embodiments, the platform is configured to provide self-organization of data pools based on at least one of the utilization metrics and yield metrics. In embodiments, the platform includes a self-organized swarm of industrial data collectors. In embodiments, the local data collection system includes a wearable haptic user interface for an industrial sensor data collector with at least one of vibration, heat, electrical, and sound outputs.

In embodiments, multiple inputs of the crosspoint switch include a third input connected to the second sensor and a fourth input connected to the second sensor. The first sensor signal is from a single-axis sensor at an unchanging location associated with the first machine. In embodiments, the second sensor is a three-axis sensor. In embodiments, the local data collection system is configured to record gap-free digital waveform data simultaneously from at least the first input, the second input, the third input, and the fourth input. In embodiments, the platform is configured to determine a change in relative phase based on the simultaneously recorded gap-free digital waveform data. In embodiments, the second sensor is configured to be movable to a plurality of positions associated with the first machine while obtaining the simultaneously recorded gap-free digital waveform data. In embodiments, multiple outputs of the crosspoint switch include a third output and fourth output. The second, third, and fourth outputs are assigned together to a sequence of tri-axial sensors each located at different positions associated with the machine. In embodiments, the platform is configured to determine an operating deflection shape based on the change in relative phase and the simultaneously recorded gap-free digital waveform data.

In embodiments, the unchanging location is a position associated with the rotating shaft of the first machine. In embodiments, tri-axial sensors in the sequence of the tri-axial sensors are each located at different positions on the first machine but are each associated with different bearings in the machine. In embodiments, tri-axial sensors in the sequence of the tri-axial sensors are each located at similar positions associated with similar bearings but are each associated with different machines. In embodiments, the local data collection system is configured to obtain the simultaneously recorded gap-free digital waveform data from the first machine while the first machine and a second machine are both in operation. In embodiments, the local data collection system is configured to characterize a contribution from the first machine and the second machine in the simultaneously recorded gap-free digital waveform data from the first machine. In embodiments, the simultaneously recorded gap-free digital waveform data has a duration that is in excess of one minute.

In embodiments, a method of monitoring a machine having at least one shaft supported by a set of bearings includes monitoring a first data channel assigned to a single-axis sensor at an unchanging location associated with the machine. The method includes monitoring second, third, and fourth data channels each assigned to an axis of a three-axis sensor. The method includes recording gap-free digital waveform data simultaneously from all of the data channels while the machine is in operation and determining a change in relative phase based on the digital waveform data.

In embodiments, the tri-axial sensor is located at a plurality of positions associated with the machine while obtaining the digital waveform. In embodiments, the second, third, and fourth channels are assigned together to a sequence of tri-axial sensors each located at different positions associated with the machine. In embodiments, the data is received from all of the sensors simultaneously. In embodiments, the method includes determining an operating deflection shape based on the change in relative phase information and the waveform data. In embodiments, the unchanging location is a position associated with the shaft of the machine. In embodiments, the tri-axial sensors in the sequence of the tri-axial sensors are each located at different positions and are each associated with different bearings in the machine. In embodiments, the unchanging location is a position associated with the shaft of the machine. The tri-axial sensors in the sequence of the tri-axial sensors are each located at different positions and are each associated with different bearings that support the shaft in the machine.

In embodiments, the method includes monitoring the first data channel assigned to the single-axis sensor at an unchanging location located on a second machine. The method includes monitoring the second, the third, and the fourth data channels, each assigned to the axis of a three-axis sensor that is located at the position associated with the second machine. The method also includes recording gap-free digital waveform data simultaneously from all of the data channels from the second machine while both of the machines are in operation. In embodiments, the method includes characterizing the contribution from each of the machines in the gap-free digital waveform data simultaneously from the second machine.

In embodiments, a method for data collection, processing, and utilization of signals with a platform monitoring at least a first element in a first machine in an industrial environment includes obtaining, automatically with a computing environment, at least a first sensor signal and a second sensor signal with a local data collection system that monitors at least the first machine. The method includes connecting a first input of a crosspoint switch of the local data collection system to a first sensor and a second input of the crosspoint switch to a second sensor in the local data collection system. The method includes switching between a condition in which a first output of the crosspoint switch alternates between delivery of at least the first sensor signal and the second sensor signal and a condition in which there is simultaneous delivery of the first sensor signal from the first output and the second sensor signal from a second output of the crosspoint switch. The method also includes switching off unassigned outputs of the crosspoint switch into a high-impedance state.

In embodiments, the first sensor signal and the second sensor signal are continuous vibration data from the industrial environment. In embodiments, the second sensor in the local data collection system is connected to the first machine. In embodiments, the second sensor in the local data collection system is connected to a second machine in the industrial environment. In embodiments, the method includes comparing, automatically with the computing environment, relative phases of the first and second sensor signals. In embodiments, the first sensor is a single-axis sensor and the second sensor is a three-axis sensor. In embodiments, at least the first input of the crosspoint switch includes internet protocol front-end signal conditioning for improved signal-to-noise ratio.

In embodiments, the method includes continuously monitoring at least a third input of the crosspoint switch with an alarm having a pre-determined trigger condition when the third input is unassigned to any of multiple outputs on the crosspoint switch. In embodiments, the local data collection system includes multiple multiplexing units and multiple data acquisition units receiving multiple data streams from multiple machines in the industrial environment. In embodiments, the local data collection system includes distributed CPLD chips each dedicated to a data bus for logic control of the multiple multiplexing units and the multiple data acquisition units that receive the multiple data streams from the multiple machines in the industrial environment. In embodiments, the local data collection system provides high-amperage input capability using solid state relays.

In embodiments, the method includes powering down at least one of an analog sensor channel and a component board of the local data collection system. In embodiments, the local data collection system includes an external voltage reference for an A/D zero reference that is independent of the voltage of the first sensor and the second sensor. In embodiments, the local data collection system includes a phase-lock loop band-pass tracking filter that obtains slow-speed RPMs and phase information. In embodiments, the method includes digitally deriving phase using on-board timers relative to at least one trigger channel and at least one of multiple inputs on the crosspoint switch.

In embodiments, the method includes autoscaling with a peak-detector using a separate analog-to-digital converter for peak detection. In embodiments, the method includes routing at least one trigger channel that is raw and buffered into at least one of multiple inputs on the crosspoint switch. In embodiments, the method includes increasing input oversampling rates with at least one delta-sigma analog-to-digital converter to reduce sampling rate outputs and to minimize anti-aliasing filter requirements. In embodiments, the distributed CPLD chips are each dedicated to the data bus for logic control of the multiple multiplexing units and the multiple data acquisition units and each include a high-frequency crystal clock reference divided by at least one of the distributed CPLD chips for at least one delta-sigma analog-to-digital converter to achieve lower sampling rates without digital resampling. In embodiments, the method includes obtaining long blocks of data at a single relatively high-sampling rate with the local data collection system as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units and each data acquisition unit has an onboard card set that stores calibration information and maintenance history of a data acquisition unit in which the onboard card set is located.

In embodiments, the method includes planning data acquisition routes based on hierarchical templates associated with at least the first element in the first machine in the industrial environment. In embodiments, the local data collection system manages data collection bands that define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system creates data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the method includes controlling a GUI system of the local data collection system to manage the data collection bands. The GUI system includes an expert system diagnostic tool. In embodiments, the computing environment of the platform includes cloud-based, machine pattern analysis of state information from multiple sensors to provide anticipated state information for the industrial environment. In embodiments, the computing environment of the platform provides self-organization of data pools based on at least one of the utilization metrics and yield metrics. In embodiments, the computing environment of the platform includes a self-organized swarm of industrial data collectors. In embodiments, each of multiple inputs of the crosspoint switch is individually assignable to any of multiple outputs of the crosspoint switch.

Methods and systems described herein for industrial machine sensor data streaming, collection, processing, and storage may be configured to operate and integrate with existing data collection, processing and storage systems and may include a method for capturing a plurality of streams of sensed data from sensors deployed to monitor aspects of an industrial machine associated with at least one moving part of the machine; at least one of the streams contains a plurality of frequencies of data. The method may include identifying a subset of data in at least one of the plurality of streams that corresponds to data representing at least one predefined frequency. The at least one predefined frequency is represented by a set of data collected from alternate sensors deployed to monitor aspects of the industrial machine associated with the at least one moving part of the machine. The method may further include processing the identified data with a data processing facility that processes the identified data with an algorithm configured to be applied to the set of data collected from alternate sensors. Lastly, the method may include storing the at least one of the streams of data, the identified subset of data, and a result of processing the identified data in an electronic data set.

Methods and systems described herein for industrial machine sensor data streaming, collection, processing, and storage may be configured to operate and integrate with existing data collection, processing, and storage systems and may include a method for applying data captured from sensors deployed to monitor aspects of an industrial machine associated with at least one moving part of the machine. The data is captured with predefined lines of resolution covering a predefined frequency range and is sent to a frequency matching facility that identifies a subset of data streamed from other sensors deployed to monitor aspects of the industrial machine associated with at least one moving part of the machine. The streamed data includes a plurality of lines of resolution and frequency ranges. The subset of data identified corresponds to the lines of resolution and predefined frequency range. This method may include storing the subset of data in an electronic data record in a format that corresponds to a format of the data captured with predefined lines of resolution and signaling to a data processing facility the presence of the stored subset of data. This method may, optionally, include processing the subset of data with at least one set of algorithms, models and pattern recognizers that corresponds to algorithms, models and pattern recognizers associated with processing the data captured with predefined lines of resolution covering a predefined frequency range.

Methods and systems described herein for industrial machine sensor data streaming, collection, processing, and storage may be configured to operate and integrate with existing data collection, processing and storage systems and may include a method for identifying a subset of streamed sensor data, the sensor data captured from sensors deployed to monitor aspects of an industrial machine associated with at least one moving part of the machine, the subset of streamed sensor data at predefined lines of resolution for a predefined frequency range, and establishing a first logical route for communicating electronically between a first computing facility performing the identifying and a second computing facility, wherein identified subset of the streamed sensor data is communicated exclusively over the established first logical route when communicating the subset of streamed sensor data from the first facility to the second facility. This method may further include establishing a second logical route for communicating electronically between the first computing facility and the second computing facility for at least one portion of the streamed sensor data that is not the identified subset. Additionally, this method may further include establishing a third logical route for communicating electronically between the first computing facility and the second computing facility for at least one portion of the streamed sensor data that includes the identified subset and at least one other portion of the data not represented by the identified subset.

Methods and systems described herein for industrial machine sensor data streaming, collection, processing, and storage may be configured to operate and integrate with existing data collection, processing and storage systems and may include a first data sensing and processing system that captures first data from a first set of sensors deployed to monitor aspects of an industrial machine associated with at least one moving part of the machine, the first data covering a set of lines of resolution and a frequency range. This system may include a second data sensing and processing system that captures and streams a second set of data from a second set of sensors deployed to monitor aspects of the industrial machine associated with at least one moving part of the machine, the second data covering a plurality of lines of resolution that includes the set of lines of resolution and a plurality of frequencies that includes the frequency range. The system may enable selecting a portion of the second data that corresponds to the set of lines of resolution and the frequency range of the first data, and processing the selected portion of the second data with the first data sensing and processing system.

Methods and systems described herein for industrial machine sensor data streaming, collection, processing, and storage may be configured to operate and integrate with existing data collection, processing and storage systems and may include a method for automatically processing a portion of a stream of sensed data. The sensed data is received from a first set of sensors deployed to monitor aspects of an industrial machine associated with at least one moving part of the machine. The sensed data is in response to an electronic data structure that facilitates extracting a subset of the stream of sensed data that corresponds to a set of sensed data received from a second set of sensors deployed to monitor the aspects of the industrial machine associated with the at least one moving part of the machine. The set of sensed data is constrained to a frequency range. The stream of sensed data includes a range of frequencies that exceeds the frequency range of the set of sensed data, the processing comprising executing an algorithm on a portion of the stream of sensed data that is constrained to the frequency range of the set of sensed data, the algorithm configured to process the set of sensed data.

Methods and systems described herein for industrial machine sensor data streaming, collection, processing, and storage may be configured to operate and integrate with existing data collection, processing and storage systems and may include a method for receiving first data from sensors deployed to monitor aspects of an industrial machine associated with at least one moving part of the machine. This method may further include detecting at least one of a frequency range and lines of resolution represented by the first data; receiving a stream of data from sensors deployed to monitor the aspects of the industrial machine associated with the at least one moving part of the machine. The stream of data includes: (1) a plurality of frequency ranges and a plurality of lines of resolution that exceeds the frequency range and the lines of resolution represented by the first data; (2) a set of data extracted from the stream of data that corresponds to at least one of the frequency range and the lines of resolution represented by the first data; and (3) the extracted set of data which is processed with a data processing algorithm that is configured to process data within the frequency range and within the lines of resolution of the first data.

The present disclosure describes a system for data collection related to an oil and gas process, the system according to one disclosed non-limiting embodiment of the present disclosure can include a multi-sensor acquisition component including a plurality of inputs and a plurality of outputs, a plurality of input sensors operatively coupled to at least one of a plurality of components of the oil and gas process, and each communicatively coupled to at least one of the plurality of inputs of the multi-sensor acquisition component, a sensor data storage profile circuit structured to determine a data storage profile, the data storage profile including a data storage plan for the plurality of sensor data values, wherein the multi-sensor acquisition component is responsive to the data storage profile and to a data collection routine to selectively couple at least one of the plurality of inputs to at least one of the plurality of outputs, a sensor communication circuit communicatively coupled to the plurality of outputs of the multi-sensor acquisition component, and structured to interpret a plurality of sensor data values, a sensor data storage implementation circuit structured to store at least a portion of the plurality of sensor data values in response to the data storage profile, a data analysis circuit structured to analyze the plurality of sensor data values and determine a data quality parameter, and a data response circuit structured to adjust at least one of the data storage profile and the data collection routine in response to the data quality parameter.

In embodiments, the multi-sensor acquisition component includes at least one of a multiplexer, an analog switch, and a cross point switch.

In embodiments, the oil and gas process includes at least one of a refining process, a drilling process, a wellbore treatment process, and a pipeline transportation process.

In embodiments, the plurality of components comprise at least one component selected from the components consisting of a motor, a pump, a compressor, a turbine, or a blower.

In embodiments, the data storage profile further includes at least one of a storage location for the at least one of the plurality of sensor data values, a time data storage trajectory including a plurality of time values corresponding to a plurality of storage locations over which the corresponding at least one of the plurality of sensor data values is to be stored; a time domain distribution over which the at least one of the plurality of sensor data values is to be stored; and location data storage trajectory including a plurality of storage locations over which the at least one of the plurality of sensor data values is to be stored.

In embodiments, the sensor data storage implementation circuit is further structured to store at least one of calibration data and maintenance history for at least one of the plurality of input sensors, and wherein the data response circuit is further configured to perform at least one of: calibrating the at least one of the plurality of input sensors, updating the maintenance history of the at least one of the plurality of input sensors, and providing a maintenance alert for the at least one of the plurality of input sensors.

In embodiments, at least one of the sensor data storage implementation circuit and the data analysis circuit includes a plurality of distributed processing circuits.

In embodiments, the data storage profile further includes a data communication path, and wherein the plurality of sensor data values is communicated through a network infrastructure along the data communication path.

In embodiments, the data storage profile further includes a plurality of data communication paths, and wherein a selected one of the plurality of data communication paths is determined in response to at least one hierarchical template.

In embodiments, the sensor data storage profile circuit is further structured to select a hierarchical template in response to at least one condition selected from the conditions consisting of: the data quality parameter, a component type associated with one of the plurality components; a process stage of the oil and gas process; an operational mode for at least one of the oil and gas process; one of the plurality of input sensors; an operating condition of one of the plurality of components; a diagnostic operation for one of the plurality of components; a diagnostic operation for the oil and gas process; an offset process from the oil and gas process; a network availability for at least a portion of the network infrastructure; a sensor availability for at least one of the plurality of input sensors; and an environmental condition associated with the oil and gas process.

In embodiments, the data response circuit further includes at least one of a rule-based expert system or a model-based expert system.

The present disclosure describes a computer-implemented method for monitoring an oil and gas process, the method according to one disclosed non-limiting embodiment of the present disclosure can include interpreting a plurality of sensor data values from a plurality of input sensors each operatively coupled to at least one of a plurality of components of an oil and gas process;

determining a data storage profile, the data storage profile including a data storage plan for the plurality of sensor data values; selectively coupling at least one of a plurality of inputs of a multi-sensor acquisition component to at least one of a plurality of outputs of the multi-sensor acquisition component in response to the data storage profile, wherein the each of the plurality of input sensors are communicatively coupled to at least one of the plurality of inputs of the multi-sensor acquisition component; interrogating at least a portion of the plurality of sensor data values from the plurality of outputs of the multi-sensor acquisition component; store at least a portion of the interrogated sensor data values in response to the data storage profile; analyzing the plurality of sensor data values to determine a data quality parameter; and adjusting the data storage profile in response to the data quality parameter.

In embodiments, the method further includes adjusting the data collection routine in response to the data quality parameter, wherein the interrogating is further in response to a data collection routine including one of: a sampling rate corresponding to one of the plurality of input sensors; a resolution corresponding to one of the plurality of input sensors; a scaling value corresponding to one of the plurality of input sensors; and a selected one of the plurality of input sensors between a plurality of available input sensors to determine a parameter of the oil and gas process.

In embodiments, the method further includes selectively communicating and storing the at least a portion of the interrogated sensor data values in a plurality of storage locations in response to the data storage profile.

In embodiments, the plurality of storage locations comprise at least one storage location selected from the locations consisting of: storage provided on a sensor; storage provided on the multi-sensor acquisition component; storage provided on a local computing resource communicatively coupled to the multi-sensor acquisition component on a network; and storage provided on a cloud computing device external to the oil and gas process.

In embodiments, the selectively communicating and storing the at least a portion of the interrogated sensor data values includes performing at least one operation selected from the operations consisting of: sequentially moving at least a portion of the interrogated sensor data values between storage locations; storing selected portions of the at least a portion of the interrogated sensor data values in selected storage locations for selected time periods; providing a time data storage trajectory for at least a portion of the interrogated sensor data values; providing a time domain distribution over which at least a portion of the interrogated sensor data values are to be stored; and providing a location data storage trajectory over which at least a portion of the interrogated sensor data values are to be stored.

In embodiments, the method further includes adjusting the data storage profile in response to a network resource value to move a data storage load between a first networked device including a first one of the plurality of storage locations and a second networked device including a second one of the plurality of storage locations, wherein the first networked device is communicatively disposed between the second networked device and the multi-sensor acquisition component.

In embodiments, the adjusting includes moving the data storage load toward the first networked device in response to at least one of: the network resource value indicating a reduced network capacity; and determining the first networked device includes sufficient storage capacity to store a selected amount of the portion of the interrogated sensor data until an expected network capacity increase event.

The present disclosure describes a monitoring apparatus for monitoring an oil and gas process, the apparatus according to one disclosed non-limiting embodiment of the present disclosure can include a sensor data storage profile circuit structured to determine a data storage profile, the data storage profile including a data storage plan for a plurality of sensor data values corresponding to components of an oil and gas process; a sensor communication circuit communicatively coupled to a plurality of outputs of a multi-sensor acquisition component communicatively coupled to a plurality of input sensors, the plurality of input sensors configured to provide the plurality of sensor data values, the sensor communication circuit structured to interpret the plurality of sensor data values according to a data collection routine; a multi-sensor acquisition component including a plurality of inputs and a plurality of outputs; a sensor data storage profile circuit structured to store a portion of the plurality of sensor data values in response to the data storage profile; a data analysis circuit structured to analyze the plurality of sensor data values and determine a data quality parameter; and a data response circuit structured to adjust at least one of the data storage profile and the data collection routine in response to the data quality parameter.

In embodiments, at least one of the plurality of sensor values includes a sensor fusion value.

In embodiments, the data storage profile further includes a data communication path, and wherein the plurality of sensor data values is communicated through a network infrastructure along the data communication path.

Methods and systems are disclosed herein for continuous ultrasonic monitoring, including providing continuous ultrasonic monitoring of rotating elements and bearings of an energy production facility; for cloud-based systems including machine pattern recognition based on the fusion of remote, analog industrial sensors or machine pattern analysis of state information from multiple analog industrial sensors to provide anticipated state information for an industrial system; for on-device sensor fusion and data storage for industrial IoT devices, including on-device sensor fusion and data storage for an Industrial IoT device, where data from multiple sensors are multiplexed at the device for storage of a fused data stream; and for self-organizing systems including a self-organizing data marketplace for industrial IoT data, including a self-organizing data marketplace for industrial IoT data, where available data elements are organized in the marketplace for consumption by consumers based on training a self-organizing facility with a training set and feedback from measures of marketplace success, for self-organizing data pools, including self-organization of data pools based on utilization and/or yield metrics, including utilization and/or yield metrics that are tracked for a plurality of data pools, a self-organized swarm of industrial data collectors, including a self-organizing swarm of industrial data collectors that organize among themselves to optimize data collection based on the capabilities and conditions of the members of the swarm, a self-organizing collector, including a self-organizing, multi-sensor data collector that can optimize data collection, power and/or yield based on conditions in its environment, a self-organizing storage for a multi-sensor data collector, including self-organizing storage for a multi-sensor data collector for industrial sensor data, a self-organizing network coding for a multi-sensor data network, including self-organizing network coding for a data network that transports data from multiple sensors in an industrial data collection environment.

Methods and systems are disclosed herein for training artificial intelligence ("AI") models based on industry-specific feedback, including training an AI model based on industry-specific feedback that reflects a measure of utilization, yield, or impact, where the AI model operates on sensor data from an industrial environment; for an industrial IoT distributed ledger, including a distributed ledger supporting the tracking of transactions executed in an automated data marketplace for industrial IoT data; for a network-sensitive collector, including a network condition-sensitive, self-organizing, multi-sensor data collector that can optimize based on bandwidth, quality of service, pricing, and/or other network conditions; for a remotely organized universal data collector that can power up and down sensor interfaces based on need and/or conditions identified in an industrial data collection environment; and for a haptic or multi-sensory user interface, including a wearable haptic or multi-sensory user interface for an industrial sensor data collector, with vibration, heat, electrical, and/or sound outputs.

Methods and systems are disclosed herein for a presentation layer for augmented reality and virtual reality (AR/VR) industrial glasses, where heat map elements are presented based on patterns and/or parameters in collected data; and for condition-sensitive, self-organized tuning of AR/VR interfaces based on feedback metrics and/or training in industrial environments.

In embodiments, a system for data collection, processing, and utilization of signals from at least a first element in a first machine in an industrial environment includes a platform including a computing environment connected to a local data collection system having at least a first sensor signal and a second sensor signal obtained from at least the first machine in the industrial environment. The system includes a first sensor in the local data collection system configured to be connected to the first machine and a second sensor in the local data collection system. The system further includes a crosspoint switch in the local data collection system having multiple inputs and multiple outputs including a first input connected to the first sensor and a second input connected to the second sensor. Throughout the present disclosure, wherever a crosspoint switch, multiplexer (MUX) device, or other multiple-input multiple-output data collection or communication device is described, any multi-sensor acquisition device is also contemplated herein. In certain embodiments, a multi-sensor acquisition device includes one or more channels configured for, or compatible with, an analog sensor input. The multiple outputs include a first output and second output configured to be switchable between a condition in which the first output is configured to switch between delivery of the first sensor signal and the second sensor signal and a condition in which there is simultaneous delivery of the first sensor signal from the first output and the second sensor signal from the second output. Each of multiple inputs is configured to be individually assigned to any of the multiple outputs, or combined in any subsets of the inputs to the outputs. Unassigned outputs are configured to be switched off, for example by producing a high-impedance state.

In embodiments, the first sensor signal and the second sensor signal are continuous vibration data about the industrial environment. In embodiments, the second sensor in the local data collection system is configured to be connected to the first machine. In embodiments, the second sensor in the local data collection system is configured to be connected to a second machine in the industrial environment. In embodiments, the computing environment of the platform is configured to compare relative phases of the first and second sensor signals. In embodiments, the first sensor is a single-axis sensor and the second sensor is a three-axis sensor. In embodiments, at least one of the multiple inputs of the crosspoint switch includes internet protocol, front-end signal conditioning, for improved signal-to-noise ratio. In embodiments, the crosspoint switch includes a third input that is configured with a continuously monitored alarm having a pre-determined trigger condition when the third input is unassigned to or undetected at any of the multiple outputs.

In embodiments, the local data collection system includes multiple multiplexing units and multiple data acquisition units receiving multiple data streams from multiple machines in the industrial environment. In embodiments, the local data collection system includes distributed complex programmable hardware device ("CPLD") chips each dedicated to a data bus for logic control of the multiple multiplexing units and the multiple data acquisition units that receive the multiple data streams from the multiple machines in the industrial environment. In embodiments, the local data collection system is configured to provide high-amperage input capability using solid state relays. In embodiments, the local data collection system is configured to power-down at least one of an analog sensor channel and a component board.

In embodiments, the local data collection system includes a phase-lock loop bandpass tracking filter configured to obtain slow-speed revolutions per minute ("RPMs") and phase information. In embodiments, the local data collection system is configured to digitally derive phase using on-board timers relative to at least one trigger channel and at least one of the multiple inputs. In embodiments, the local data collection system includes a peak-detector configured to autoscale using a separate analog-to-digital converter for peak detection. In embodiments, the local data collection system is configured to route at least one trigger channel that is raw and buffered into at least one of the multiple inputs. In embodiments, the local data collection system includes at least one delta-sigma analog-to-digital converter that is configured to increase input oversampling rates to reduce sampling rate outputs and to minimize anti-aliasing filter requirements. In embodiments, the distributed CPLD chips each dedicated to the data bus for logic control of the multiple multiplexing units and the multiple data acquisition units includes as high-frequency crystal clock reference configured to be divided by at least one of the distributed CPLD chips for at least one delta-sigma analog-to-digital converter to achieve lower sampling rates without digital resampling.

In embodiments, the local data collection system is configured to obtain long blocks of data at a single relatively high-sampling rate as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units each having an onboard card set configured to store calibration information and maintenance history of a data acquisition unit in which the onboard card set is located. In embodiments, the local data collection system is configured to plan data acquisition routes based on hierarchical templates.

In embodiments, the local data collection system is configured to manage data collection bands. In embodiments, the data collection bands define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In

embodiments, the local data collection system is configured to create data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the local data collection system includes a graphical user interface ("GUI") system configured to manage the data collection bands. In embodiments, the GUI system includes an expert system diagnostic tool. In embodiments, the platform includes cloud-based, machine pattern analysis of state information from multiple sensors to provide anticipated state information for the industrial environment. In embodiments, the platform is configured to provide self-organization of data pools based on at least one of the utilization metrics and yield metrics. In embodiments, the platform includes a self-organized swarm of industrial data collectors. In embodiments, the local data collection system includes a wearable haptic user interface for an industrial sensor data collector with at least one of vibration, heat, electrical, and sound outputs.

In embodiments, multiple inputs of the cross-point switch include a third input connected to the second sensor and a fourth input connected to the second sensor. The first sensor signal is from a single-axis sensor at an unchanging location associated with the first machine. In embodiments, the second sensor is a three-axis sensor. In embodiments, the local data collection system is configured to record gap-free digital waveform data simultaneously from at least the first input, the second input, the third input, and the fourth input. In embodiments, the platform is configured to determine a change in relative phase based on the simultaneously recorded gap-free digital waveform data. In embodiments, the second sensor is configured to be movable to a plurality of positions associated with the first machine while obtaining the simultaneously recorded gap-free digital waveform data. In embodiments, multiple outputs of the crosspoint switch include a third output and fourth output. The second, third, and fourth outputs are assigned together to a sequence of tri-axial sensors each located at different positions associated with the machine. In embodiments, the platform is configured to determine an operating deflection shape based on the change in relative phase and the simultaneously recorded gap-free digital waveform data.

In embodiments, the unchanging location is a position associated with the rotating shaft of the first machine. In embodiments, tri-axial sensors in the sequence of the tri-axial sensors are each located at different positions on the first machine but are each associated with different bearings in the machine. In embodiments, tri-axial sensors in the sequence of the tri-axial sensors are each located at similar positions associated with similar bearings but are each associated with different machines. In embodiments, the local data collection system is configured to obtain the simultaneously recorded gap-free digital waveform data from the first machine while the first machine and a second machine are both in operation. In embodiments, the local data collection system is configured to characterize a contribution from the first machine and the second machine in the simultaneously recorded gap-free digital waveform data from the first machine. In embodiments, the simultaneously recorded gap-free digital waveform data has a duration that is in excess of one minute.

In embodiments, a method of monitoring a machine having at least one shaft supported by a set of bearings includes monitoring a first data channel assigned to a single-axis sensor at an unchanging location associated with the machine. The method includes monitoring second, third, and fourth data channels each assigned to an axis of a three-axis sensor. The method includes recording gap-free digital waveform data simultaneously from all of the data channels while the machine is in operation and determining a change in relative phase based on the digital waveform data.

In embodiments, the tri-axial sensor is located at a plurality of positions associated with the machine while obtaining the digital waveform. In embodiments, the second, third, and fourth channels are assigned together to a sequence of tri-axial sensors each located at different positions associated with the machine. In embodiments, the data is received from all of the sensors simultaneously. In embodiments, the method includes determining an operating deflection shape based on the change in relative phase information and the waveform data. In embodiments, the unchanging location is a position associated with the shaft of the machine. In embodiments, the tri-axial sensors in the sequence of the tri-axial sensors are each located at different positions and are each associated with different bearings in the machine. In embodiments, the unchanging location is a position associated with the shaft of the machine. The tri-axial sensors in the sequence of the tri-axial sensors are each located at different positions and are each associated with different bearings that support the shaft in the machine.

In embodiments, the method includes monitoring the first data channel assigned to the single-axis sensor at an unchanging location located on a second machine. The method includes monitoring the second, the third, and the fourth data channels, each assigned to the axis of a three-axis sensor that is located at the position associated with the second machine. The method also includes recording gap-free digital waveform data simultaneously from all of the data channels from the second machine while both of the machines are in operation. In embodiments, the method includes characterizing the contribution from each of the machines in the gap-free digital waveform data simultaneously from the second machine.

In embodiments, a method for data collection, processing, and utilization of signals with a platform monitoring at least a first element in a first machine in an industrial environment includes obtaining, automatically with a computing environment, at least a first sensor signal and a second sensor signal with a local data collection system that monitors at least the first machine. The method includes connecting a first input of a crosspoint switch of the local data collection system to a first sensor and a second input of the crosspoint switch to a second sensor in the local data collection system. The method includes switching between a condition in which a first output of the crosspoint switch alternates between delivery of at least the first sensor signal and the second sensor signal and a condition in which there is simultaneous delivery of the first sensor signal from the first output and the second sensor signal from a second output of the crosspoint switch. The method also includes switching off unassigned outputs of the crosspoint switch into a high-impedance state.

In embodiments, the first sensor signal and the second sensor signal are continuous vibration data from the industrial environment. In embodiments, the second sensor in the local data collection system is connected to the first machine. In embodiments, the second sensor in the local data collection system is connected to a second machine in the industrial environment. In embodiments, the method includes comparing, automatically with the computing environment, relative phases of the first and second sensor signals. In embodiments, the first sensor is a single-axis sensor and the second sensor is a three-axis sensor. In embodiments, at least the first input of the crosspoint switch includes internet protocol front-end signal conditioning for improved signal-to-noise ratio.

In embodiments, the method includes continuously monitoring at least a third input of the crosspoint switch with an alarm having a pre-determined trigger condition when the third input is unassigned to any of multiple outputs on the crosspoint switch. In embodiments, the local data collection system includes multiple multiplexing units and multiple data acquisition units receiving multiple data streams from multiple machines in the industrial environment. In embodiments, the local data collection system includes distributed CPLD chips each dedicated to a data bus for logic control of the multiple multiplexing units and the multiple data acquisition units that receive the multiple data streams from the multiple machines in the industrial environment. In embodiments, the local data collection system provides high-amperage input capability using solid state relays.

In embodiments, the method includes powering down at least one of an analog sensor channel and a component board of the local data collection system. In embodiments, the local data collection system includes an external voltage reference for an A/D zero reference that is independent of the voltage of the first sensor and the second sensor. In embodiments, the local data collection system includes a phase-lock loop bandpass tracking filter that obtains slow-speed RPMs and phase information. In embodiments, the method includes digitally deriving phase using on-board timers relative to at least one trigger channel and at least one of multiple inputs on the crosspoint switch.

In embodiments, the method includes autoscaling with a peak-detector using a separate analog-to-digital converter for peak detection. In embodiments, the method includes routing at least one trigger channel that is raw and buffered into at least one of multiple inputs on the crosspoint switch. In embodiments, the method includes increasing input oversampling rates with at least one delta-sigma analog-to-digital converter to reduce sampling rate outputs and to minimize anti-aliasing filter requirements. In embodiments, the distributed CPLD chips are each dedicated to the data bus for logic control of the multiple multiplexing units and the multiple data acquisition units and each include a high-frequency crystal clock reference divided by at least one of the distributed CPLD chips for at least one delta-sigma analog-to-digital converter to achieve lower sampling rates without digital resampling. In embodiments, the method includes obtaining long blocks of data at a single relatively high-sampling rate with the local data collection system as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units and each data acquisition unit has an onboard card set that stores calibration information and maintenance history of a data acquisition unit in which the onboard card set is located.

In embodiments, the method includes planning data acquisition routes based on hierarchical templates associated with at least the first element in the first machine in the industrial environment. In embodiments, the local data collection system manages data collection bands that define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system creates data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the method includes controlling a GUI system of the local data collection system to manage the data collection bands. The GUI system includes an expert system diagnostic tool. In embodiments, the computing environment of the platform includes cloud-based, machine pattern analysis of state information from multiple sensors to provide anticipated state information for the industrial environment. In embodiments, the computing environment of the platform provides self-organization of data pools based on at least one of the utilization metrics and yield metrics. In embodiments, the computing environment of the platform includes a self-organized swarm of industrial data collectors. In embodiments, each of multiple inputs of the crosspoint switch is individually assignable to any of multiple outputs of the crosspoint switch.

Methods and systems described herein for industrial machine sensor data streaming, collection, processing, and storage may be configured to operate and integrate with existing data collection, processing and storage systems and may include a method for capturing a plurality of streams of sensed data from sensors deployed to monitor aspects of an industrial machine associated with at least one moving part of the machine; at least one of the streams contains a plurality of frequencies of data. The method may include identifying a subset of data in at least one of the plurality of streams that corresponds to data representing at least one predefined frequency. The at least one predefined frequency is represented by a set of data collected from alternate sensors deployed to monitor aspects of the industrial machine associated with the at least one moving part of the machine. The method may further include processing the identified data with a data processing facility that processes the identified data with an algorithm configured to be applied to the set of data collected from alternate sensors. Lastly, the method may include storing the at least one of the streams of data, the identified subset of data, and a result of processing the identified data in an electronic data set.

Methods and systems described herein for industrial machine sensor data streaming, collection, processing, and storage may be configured to operate and integrate with existing data collection, processing, and storage systems and may include a method for applying data captured from sensors deployed to monitor aspects of an industrial machine associated with at least one moving part of the machine. The data is captured with predefined lines of resolution covering a predefined frequency range and is sent to a frequency matching facility that identifies a subset of data streamed from other sensors deployed to monitor aspects of the industrial machine associated with at least one moving part of the machine. The streamed data includes a plurality of lines of resolution and frequency ranges. The subset of data identified corresponds to the lines of resolution and predefined frequency range. This method may include storing the subset of data in an electronic data record in a format that corresponds to a format of the data captured with predefined lines of resolution and signaling to a data processing facility the presence of the stored subset of data. This method may, optionally, include processing the subset of data with at least one set of algorithms, models and pattern recognizers that corresponds to algorithms, models and pattern recognizers associated with processing the data captured with predefined lines of resolution covering a predefined frequency range.

Methods and systems described herein for industrial machine sensor data streaming, collection, processing, and storage may be configured to operate and integrate with existing data collection, processing and storage systems and may include a method for identifying a subset of streamed sensor data, the sensor data captured from sensors deployed to monitor aspects of an industrial machine associated with at least one moving part of the machine, the subset of streamed sensor data at predefined lines of resolution for a predefined frequency range, and establishing a first logical route for communicating electronically between a first computing facility performing the identifying and a second computing facility, wherein identified subset of the streamed sensor data is communicated exclusively over the established first logical route when communicating the subset of streamed sensor data from the first facility to the second facility. This method may further include establishing a second logical route for communicating electronically between the first computing facility and the second computing facility for at least one portion of the streamed sensor data that is not the identified subset. Additionally, this method may further include establishing a third logical route for communicating electronically between the first computing facility and the second computing facility for at least one portion of the streamed sensor data that includes the identified subset and at least one other portion of the data not represented by the identified subset.

Methods and systems described herein for industrial machine sensor data streaming, collection, processing, and storage may be configured to operate and integrate with existing data collection, processing and storage systems and may include a first data sensing and processing system that captures first data from a first set of sensors deployed to monitor aspects of an industrial machine associated with at least one moving part of the machine, the first data covering a set of lines of resolution and a frequency range. This system may include a second data sensing and processing system that captures and streams a second set of data from a second set of sensors deployed to monitor aspects of the industrial machine associated with at least one moving part of the machine, the second data covering a plurality of lines of resolution that includes the set of lines of resolution and a plurality of frequencies that includes the frequency range. The system may enable selecting a portion of the second data that corresponds to the set of lines of resolution and the frequency range of the first data, and processing the selected portion of the second data with the first data sensing and processing system.

Methods and systems described herein for industrial machine sensor data streaming, collection, processing, and storage may be configured to operate and integrate with existing data collection, processing and storage systems and may include a method for automatically processing a portion of a stream of sensed data. The sensed data is received from a first set of sensors deployed to monitor aspects of an industrial machine associated with at least one moving part of the machine. The sensed data is in response to an electronic data structure that facilitates extracting a subset of the stream of sensed data that corresponds to a set of sensed data received from a second set of sensors deployed to monitor the aspects of the industrial machine associated with the at least one moving part of the machine. The set of sensed data is constrained to a frequency range. The stream of sensed data includes a range of frequencies that exceeds the frequency range of the set of sensed data, the processing comprising executing an algorithm on a portion of the stream of sensed data that is constrained to the frequency range of the set of sensed data, the algorithm configured to process the set of sensed data.

Methods and systems described herein for industrial machine sensor data streaming, collection, processing, and storage may be configured to operate and integrate with existing data collection, processing and storage systems and may include a method for receiving first data from sensors deployed to monitor aspects of an industrial machine associated with at least one moving part of the machine. This method may further include detecting at least one of a frequency range and lines of resolution represented by the first data; receiving a stream of data from sensors deployed to monitor the aspects of the industrial machine associated with the at least one moving part of the machine. The stream of data includes: (1) a plurality of frequency ranges and a plurality of lines of resolution that exceeds the frequency range and the lines of resolution represented by the first data; (2) a set of data extracted from the stream of data that corresponds to at least one of the frequency range and the lines of resolution represented by the first data; and (3) the extracted set of data which is processed with a data processing algorithm that is configured to process data within the frequency range and within the lines of resolution of the first data.

In embodiments, a system for monitoring a processing asset for one of an oil processing facility and a gas processing facility may comprise: a data acquisition circuit structured to interpret a plurality of detection values, each of the plurality of detection values corresponding to input received from a detection package, the detection package comprising at least one of a plurality of input sensors, each of the plurality of input sensors operatively coupled to at least one of a plurality of process components; a data analysis circuit structured to analyze a subset of the plurality of detection values to determine a status parameter, wherein the status parameter comprises at least one value selected from the values consisting of: a process stage, a process rate, a process order, an anticipated life of the processing asset, an anticipated completion time of the process, an anticipated life of one of the plurality of process components, a process event, a confidence level regarding a process quality, a detection capability, a transmission capability of a network communicating at least a portion of the detection values, achievement of a process goal, an output production rate, an operational efficiency, an operational failure rate, a power efficiency, a power resource status, an identified risk, a temperature for at least one of a time and a location in a process, a failure prediction, an identified safety issue, an off-nominal process, and an identified maintenance requirement; and an analysis response circuit structured to adjust a process utilizing the processing asset in response to the status parameter, wherein adjusting the process utilizing the processing asset comprises altering at least one process parameter selected from the process parameters consisting of: a temperature, an operating speed, a utilization value of one of the plurality of process components, and a process flow. In embodiments, the data analysis circuit may include a pattern recognition circuit structured to analyze the subset of the plurality of detection values with at least one of a neural net or an expert system. The pattern recognition circuit may be structured to determine a sensor effectiveness value, and to determine the sensor effectiveness by performing at least one operation selected from the operations consisting of: determining a signal effectiveness of at least one of the plurality of input sensors relative to a value of interest; determining a sensitivity of at least one of the plurality of input sensors relative to a value of interest; determining a predictive confidence of at least one of the plurality of input sensors relative to a value of interest; determining a predictive delay time of at least one of the plurality of input sensors relative to a value of interest; determining a predictive accuracy of at least one of the plurality of input sensors relative to a value of interest; determining a predictive precision of at least one of the plurality of input sensors relative to a value of interest; and updating the pattern recognition operation further in response to external feedback. The analysis response circuit may be structured to adjust the detection package in response to at least one of the status parameter and the sensor effectiveness value, wherein adjusting the detection package comprises adjusting at least one sensor parameter selected from the sensor parameters consisting of: a sensor range; a sensor scaling value; a sensor sampling frequency; and a utilized sensor value, the utilized sensor value indicating which sensor from a plurality of available sensors is utilized in the detection package, and wherein the plurality of available sensors have at least one distinct sensing parameter selected from the sensing parameters consisting of: input ranges, sensitivity values, locations, reliability values, duty cycle values, sensor types, and maintenance requirements. The analysis response circuit may be structured to adjust an equipment package by changing at least one equipment value selected from the equipment values consisting of: an equipment type, operating parameters for a piece of equipment, an amelioration action for an equipment issue, and a recommendation regarding future equipment. The data analysis circuit may be further configured to determine an alarm value in response to at least one of the subset of detection values, and wherein the analysis response circuit is further configured to continuously monitor the alarm value. The analysis response circuit may be structured to rebalance loads between process components by performing the rebalancing to achieve at least one of: extend a life of one of the plurality of process components, improve a probability of success of the process using the processing asset, and facilitate maintenance on one of the plurality of process components. The data analysis circuit may be structured to remove known noise from at least one of the subset of the plurality of detection values to facilitate analysis of the at least one of the subset of the plurality of detection values. The data analysis circuit may include a classification circuit structured to classify at least one of: an equipment type or identity of one of the plurality of components; one of the plurality of input sensors; and a type or identity of a distant device, the distant device comprising a device that is one of operationally or environmentally coupled to the process utilizing the processing asset but is not one of the plurality of components; and wherein the classification circuit comprises at least one of a neural net or an expert system. The data analysis circuit may include an optimization circuit structured to provide recommendations regarding at least one of: a detection package, an equipment package, and a set of process parameters; and wherein the optimization circuit comprises at least one of a neural net or an expert system. The processing asset may include one of a refinery and a pipeline, and wherein the plurality of components comprise at least one component selected from the components consisting of: a compressor, a turbine, a blower, a fluid conveyance pipe or tube, a reaction vessel, and a distillation column.

In embodiments, a method of monitoring a processing asset for one of an oil processing facility and a gas processing facility may comprise: interpreting a plurality of detection values, each of the plurality of detection values corresponding to input received from a detection package, the detection package comprising at least one of a plurality of input sensors, each of the plurality of input sensors operatively coupled to at least one of a plurality of process components; analyzing a subset of the plurality of detection values to determine a status parameter, wherein the status parameter comprises at least one value selected from the values consisting of: a process stage, a process rate, a process order, an anticipated life of the processing asset, an anticipated life of one of the plurality of process components, a process event, a confidence level regarding a process quality, a detection capability, a transmission capability of a network communicating at least a portion of the detection values, achievement of a process goal, an output production rate, an operational efficiency, an operational failure rate, a power efficiency, a power resource status, an identified risk, a temperature for at least one of a time and a location in a process, a failure prediction, an identified safety issue, an off-nominal process, and an identified maintenance requirement; and providing an analysis response circuit structured to adjust a process utilizing the processing asset in response to the status parameter, wherein adjusting the process comprises at least one process parameter selected from the process parameters consisting of: a temperature, an operating speed, a utilization value of one of the plurality of process components, and a process flow. In embodiments, the method may perform a pattern recognition operation to analyze the subset of the plurality of detection values with at least one of a neural net or an expert system. The method may perform the pattern recognition operation further comprises determining a sensor effectiveness value by performing at least one operation selected from the operations consisting of: determining a signal effectiveness of at least one of the plurality of input sensors relative to a value of interest; determining a sensitivity of at least one of the plurality of input sensors relative to a value of interest; determining a predictive confidence of at least one of the plurality of input sensors relative to a value of interest; determining a predictive delay time of at least one of the plurality of input sensors relative to a value of interest; determining a predictive accuracy of at least one of the plurality of input sensors relative to a value of interest; determining a predictive precision of at least one of the plurality of input sensors relative to a value of interest; and updating the pattern recognition operation further in response to external feedback. The method may adjust the detection package in response to the status parameter, wherein adjusting the detection package comprises adjusting at least one sensor parameter selected from the sensor parameters consisting of: a sensor range; a sensor scaling value; a sensor sampling frequency; and a utilized sensor value, the utilized sensor value indicating which sensor from a plurality of available sensors is utilized in the detection package, and wherein the plurality of available sensors have at least one distinct sensing parameter selected from the sensing parameters consisting of: input ranges, sensitivity values, locations, reliability values, duty cycle values, sensor types, and maintenance requirements. The method may adjust the detection package in response to at least one of the status parameter and the sensor effectiveness value, wherein adjusting the detection package comprises adjusting at least one sensor parameter selected from the sensor parameters consisting of: a sensor range; a sensor scaling value; a sensor sampling frequency; and a utilized sensor value, the utilized sensor value indicating which sensor from a plurality of available sensors is utilized in the detection package, and wherein the plurality of available sensors have at least one distinct sensing parameter selected from the sensing parameters consisting of: input ranges, sensitivity values, locations, reliability values, duty cycle values, sensor types, and maintenance requirements.

In embodiments, an apparatus for monitoring a processing asset for one of an oil processing facility and a gas processing facility may comprise: a data acquisition component configured to interpret a plurality of detection values, each of the plurality of detection values corresponding to input received from a detection package, the detection package comprising at least one of a plurality of input sensors, each of the plurality of input sensors operatively coupled to at least one of a plurality of process components; a data analysis component configured to analyze a subset of the plurality of detection values to determine a status parameter, wherein the status parameter comprises at least one value selected from the values consisting of: a process stage, a process rate, a process order, an anticipated life of the processing asset, an anticipated completion time of the process, an anticipated life of one of the plurality of process components, a process event, a confidence level regarding a process quality, a detection capability, a transmission capability of a network communicating at least a portion of the detection values, achievement of a process goal, an output production rate, an operational efficiency, an operational failure rate, a power efficiency, a power resource status, an identified risk, a temperature for at least one of a time and a location in a process, a failure prediction, an identified safety issue, an off-nominal process, and an identified maintenance requirement; and an analysis response component configured to adjust a process utilizing the processing asset in response to the status parameter, wherein adjusting the process utilizing the processing asset comprises altering at least one process parameter selected from the process parameters consisting of: a temperature, an operating speed, a utilization value of one of the plurality of process components, and a process flow. The analysis response component may be configured to adjust, in response to the status parameter, at least one of: the detection package, an equipment package comprising the plurality of components, and process loads. The data analysis may further comprise: a classification component configured to classify at least one of: an equipment type or identity of one of the plurality of components; one of the plurality of input sensors; and a type or identity of a distant device, the distant device comprising a device that is one of operationally or environmentally coupled to the process utilizing the processing asset but is not one of the plurality of components; and wherein the classification component comprises at least one of a neural net or an expert system. The data analysis component may comprise: a pattern recognition component configured to analyze the subset of the plurality of detection values with at least one of a neural net or an expert system to determine a sensor classification effectiveness value comprising an effectiveness of the classifying of the classification component, and to determine the sensor classification effectiveness value by performing at least one operation selected from the operations consisting of: determining a signal effectiveness of at least one of the plurality of input sensors relative to the effectiveness of the classifying; determining a sensitivity of at least one of the plurality of input sensors relative to the effectiveness of the classifying; determining a predictive confidence of at least one of the plurality of input sensors relative to the effectiveness of the classifying; determining a predictive delay time of at least one of the plurality of input sensors relative to the effectiveness of the classifying; determining a predictive accuracy of at least one of the plurality of input sensors relative to the effectiveness of the classifying; determining a predictive precision of at least one of the plurality of input sensors relative to the effectiveness of the classifying; and wherein the apparatus further comprises at least one of: the analysis response component further configured to update the detection package in response to the sensor classification value; and the classification component further configured to update operations to classify the at least one of: an equipment type or identity of one of the plurality of components; one of the plurality of input sensors; and a type or identity of a distant device; in response to the sensor classification value.

Methods and systems are disclosed herein for continuous ultrasonic monitoring, including providing continuous ultrasonic monitoring of rotating elements and bearings of an energy production facility; for cloud-based systems including machine pattern recognition based on the fusion of remote, analog industrial sensors or machine pattern analysis of state information from multiple analog industrial sensors to provide anticipated state information for an industrial system; for on-device sensor fusion and data storage for industrial IoT devices, including on-device sensor fusion and data storage for an Industrial IoT device, where data from multiple sensors are multiplexed at the device for storage of a fused data stream; and for self-organizing systems including a self-organizing data marketplace for industrial IoT data, including a self-organizing data marketplace for industrial IoT data, where available data elements are organized in the marketplace for consumption by consumers based on training a self-organizing facility with a training set and feedback from measures of marketplace success, for self-organizing data pools, including self-organization of data pools based on utilization and/or yield metrics, including utilization and/or yield metrics that are tracked for a plurality of data pools, a self-organized swarm of industrial data collectors, including a self-organizing swarm of industrial data collectors that organize among themselves to optimize data collection based on the capabilities and conditions of the members of the swarm, a self-organizing collector, including a self-organizing, multi-sensor data collector that can optimize data collection, power and/or yield based on conditions in its environment, a self-organizing storage for a multi-sensor data collector, including self-organizing storage for a multi-sensor data collector for industrial sensor data, a self-organizing network coding for a multi-sensor data network, including self-organizing network coding for a data network that transports data from multiple sensors in an industrial data collection environment.

Methods and systems are disclosed herein for training artificial intelligence ("AI") models based on industry-specific feedback, including training an AI model based on industry-specific feedback that reflects a measure of utilization, yield, or impact, where the AI model operates on sensor data from an industrial environment; for an industrial IoT distributed ledger, including a distributed ledger supporting the tracking of transactions executed in an automated data marketplace for industrial IoT data; for a network-sensitive collector, including a network condition-sensitive, self-organizing, multi-sensor data collector that can optimize based on bandwidth, quality of service, pricing, and/or other network conditions; for a remotely organized universal data collector that can power up and down sensor interfaces based on need and/or conditions identified in an industrial data collection environment; and for a haptic or multi-sensory user interface, including a wearable haptic or multi-sensory user interface for an industrial sensor data collector, with vibration, heat, electrical, and/or sound outputs.

Methods and systems are disclosed herein for a presentation layer for augmented reality and virtual reality (AR/VR) industrial glasses, where heat map elements are presented based on patterns and/or parameters in collected data; and for condition-sensitive, self-organized tuning of AR/VR interfaces based on feedback metrics and/or training in industrial environments.

In embodiments, a system for data collection, processing, and utilization of signals from at least a first element in a first machine in an industrial environment includes a platform including a computing environment connected to a local data collection system having at least a first sensor signal and a second sensor signal obtained from at least the first machine in the industrial environment. The system includes a first sensor in the local data collection system configured to be connected to the first machine and a second sensor in the local data collection system. The system further includes a crosspoint switch in the local data collection system having multiple inputs and multiple outputs including a first input connected to the first sensor and a second input connected to the second sensor. Throughout the present disclosure, wherever a crosspoint switch, multiplexer (MUX) device, or other multiple-input multiple-output data collection or communication device is described, any multi-sensor acquisition device is also contemplated herein. In certain embodiments, a multi-sensor acquisition device includes one or more channels configured for, or compatible with, an analog sensor input. The multiple outputs include a first output and second output configured to be switchable between a condition in which the first output is configured to switch between delivery of the first sensor signal and the second sensor signal and a condition in which there is simultaneous delivery of the first sensor signal from the first output and the second sensor signal from the second output. Each of multiple inputs is configured to be individually assigned to any of the multiple outputs, or combined in any subsets of the inputs to the outputs. Unassigned outputs are configured to be switched off, for example by producing a high-impedance state.

In embodiments, the first sensor signal and the second sensor signal are continuous vibration data about the industrial environment. In embodiments, the second sensor in the local data collection system is configured to be connected to the first machine. In embodiments, the second sensor in the local data collection system is configured to be connected to a second machine in the industrial environment. In embodiments, the computing environment of the platform is configured to compare relative phases of the first and second sensor signals. In embodiments, the first sensor is a single-axis sensor and the second sensor is a three-axis sensor. In embodiments, at least one of the multiple inputs of the crosspoint switch includes internet protocol, front-end signal conditioning, for improved signal-to-noise ratio. In embodiments, the crosspoint switch includes a third input that is configured with a continuously monitored alarm having a pre-determined trigger condition when the third input is unassigned to or undetected at any of the multiple outputs.

In embodiments, the local data collection system includes multiple multiplexing units and multiple data acquisition units receiving multiple data streams from multiple machines in the industrial environment. In embodiments, the local data collection system includes distributed complex programmable hardware device ("CPLD") chips each dedicated to a data bus for logic control of the multiple multiplexing units and the multiple data acquisition units that receive the multiple data streams from the multiple machines in the industrial environment. In embodiments, the local data collection system is configured to provide high-amperage input capability using solid state relays. In embodiments, the local data collection system is configured to power-down at least one of an analog sensor channel and a component board.

In embodiments, the local data collection system includes a phase-lock loop bandpass tracking filter configured to obtain slow-speed revolutions per minute ("RPMs") and phase information. In embodiments, the local data collection system is configured to digitally derive phase using on-board timers relative to at least one trigger channel and at least one of the multiple inputs. In embodiments, the local data collection system includes a peak-detector configured to autoscale using a separate analog-to-digital converter for peak detection. In embodiments, the local data collection system is configured to route at least one trigger channel that is raw and buffered into at least one of the multiple inputs. In embodiments, the local data collection system includes at least one delta-sigma analog-to-digital converter that is configured to increase input oversampling rates to reduce sampling rate outputs and to minimize anti-aliasing filter requirements. In embodiments, the distributed CPLD chips each dedicated to the data bus for logic control of the multiple multiplexing units and the multiple data acquisition units includes as high-frequency crystal clock reference configured to be divided by at least one of the distributed CPLD chips for at least one delta-sigma analog-to-digital converter to achieve lower sampling rates without digital resampling.

In embodiments, the local data collection system is configured to obtain long blocks of data at a single relatively high-sampling rate as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units each having an onboard card set configured to store calibration information and maintenance history of a data acquisition unit in which the onboard card set is located. In embodiments, the local data collection system is configured to plan data acquisition routes based on hierarchical templates.

In embodiments, the local data collection system is configured to manage data collection bands. In embodiments, the data collection bands define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system is configured to create data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the local data collection system includes a graphical user interface ("GUI") system configured to manage the data collection bands. In embodiments, the GUI system includes an expert system diagnostic tool. In embodiments, the platform includes cloud-based, machine pattern analysis of state information from multiple sensors to provide anticipated state information for the industrial environment. In embodiments, the platform is configured to provide self-organization of data pools based on at least one of the utilization metrics and yield metrics. In embodiments, the platform includes a self-organized swarm of industrial data collectors. In embodiments, the local data collection system includes a wearable haptic user interface for an industrial sensor data collector with at least one of vibration, heat, electrical, and sound outputs.

In embodiments, multiple inputs of the crosspoint switch include a third input connected to the second sensor and a fourth input connected to the second sensor. The first sensor signal is from a single-axis sensor at an unchanging location associated with the first machine. In embodiments, the second sensor is a three-axis sensor. In embodiments, the local data collection system is configured to record gap-free digital waveform data simultaneously from at least the first input, the second input, the third input, and the fourth input. In embodiments, the platform is configured to determine a change in relative phase based on the simultaneously recorded gap-free digital waveform data. In embodiments, the second sensor is configured to be movable to a plurality of positions associated with the first machine while obtaining the simultaneously recorded gap-free digital waveform data. In embodiments, multiple outputs of the crosspoint switch include a third output and fourth output. The second, third, and fourth outputs are assigned together to a sequence of tri-axial sensors each located at different positions associated with the machine. In embodiments, the platform is configured to determine an operating deflection shape based on the change in relative phase and the simultaneously recorded gap-free digital waveform data.

In embodiments, the unchanging location is a position associated with the rotating shaft of the first machine. In embodiments, tri-axial sensors in the sequence of the tri-axial sensors are each located at different positions on the first machine but are each associated with different bearings in the machine. In embodiments, tri-axial sensors in the sequence of the tri-axial sensors are each located at similar positions associated with similar bearings but are each associated with different machines. In embodiments, the local data collection system is configured to obtain the simultaneously recorded gap-free digital waveform data from the first machine while the first machine and a second machine are both in operation. In embodiments, the local data collection system is configured to characterize a contribution from the first machine and the second machine in the simultaneously recorded gap-free digital waveform data from the first machine. In embodiments, the simultaneously recorded gap-free digital waveform data has a duration that is in excess of one minute.

In embodiments, a method of monitoring a machine having at least one shaft supported by a set of bearings includes monitoring a first data channel assigned to a single-axis sensor at an unchanging location associated with the machine. The method includes monitoring second, third, and fourth data channels each assigned to an axis of a three-axis sensor. The method includes recording gap-free digital waveform data simultaneously from all of the data channels while the machine is in operation and determining a change in relative phase based on the digital waveform data.

In embodiments, the tri-axial sensor is located at a plurality of positions associated with the machine while obtaining the digital waveform. In embodiments, the second, third, and fourth channels are assigned together to a sequence of tri-axial sensors each located at different positions associated with the machine. In embodiments, the data is received from all of the sensors simultaneously. In embodiments, the method includes determining an operating deflection shape based on the change in relative phase information and the waveform data. In embodiments, the unchanging location is a position associated with the shaft of the machine. In embodiments, the tri-axial sensors in the sequence of the tri-axial sensors are each located at different positions and are each associated with different bearings in the machine. In embodiments, the unchanging location is a position associated with the shaft of the machine. The tri-axial sensors in the sequence of the tri-axial sensors are each located at different positions and are each associated with different bearings that support the shaft in the machine.

In embodiments, the method includes monitoring the first data channel assigned to the single-axis sensor at an unchanging location located on a second machine. The method includes monitoring the second, the third, and the fourth data channels, each assigned to the axis of a three-axis sensor that is located at the position associated with the second machine. The method also includes recording gap-free digital waveform data simultaneously from all of the data channels from the second machine while both of the machines are in operation. In embodiments, the method includes characterizing the contribution from each of the machines in the gap-free digital waveform data simultaneously from the second machine.

In embodiments, a method for data collection, processing, and utilization of signals with a platform monitoring at least a first element in a first machine in an industrial environment includes obtaining, automatically with a computing environment, at least a first sensor signal and a second sensor signal with a local data collection system that monitors at least the first machine. The method includes connecting a first input of a crosspoint switch of the local data collection system to a first sensor and a second input of the crosspoint switch to a second sensor in the local data collection system. The method includes switching between a condition in which a first output of the crosspoint switch alternates between delivery of at least the first sensor signal and the second sensor signal and a condition in which there is simultaneous delivery of the first sensor signal from the first output and the second sensor signal from a second output of the crosspoint switch. The method also includes switching off unassigned outputs of the crosspoint switch into a high-impedance state.

In embodiments, the first sensor signal and the second sensor signal are continuous vibration data from the industrial environment. In embodiments, the second sensor in the local data collection system is connected to the first machine. In embodiments, the second sensor in the local data collection system is connected to a second machine in the industrial environment. In embodiments, the method includes comparing, automatically with the computing environment, relative phases of the first and second sensor signals. In embodiments, the first sensor is a single-axis sensor and the second sensor is a three-axis sensor. In embodiments, at least the first input of the crosspoint switch includes internet protocol front-end signal conditioning for improved signal-to-noise ratio.

In embodiments, the method includes continuously monitoring at least a third input of the crosspoint switch with an alarm having a pre-determined trigger condition when the third input is unassigned to any of multiple outputs on the crosspoint switch. In embodiments, the local data collection system includes multiple multiplexing units and multiple data acquisition units receiving multiple data streams from multiple machines in the industrial environment. In embodiments, the local data collection system includes distributed CPLD chips each dedicated to a data bus for logic control of the multiple multiplexing units and the multiple data acquisition units that receive the multiple data streams from the multiple machines in the industrial environment. In embodiments, the local data collection system provides high-amperage input capability using solid state relays.

In embodiments, the method includes powering down at least one of an analog sensor channel and a component board of the local data collection system. In embodiments, the local data collection system includes an external voltage reference for an A/D zero reference that is independent of the voltage of the first sensor and the second sensor. In embodiments, the local data collection system includes a phase-lock loop bandpass tracking filter that obtains slow-speed RPMs and phase information. In embodiments, the method includes digitally deriving phase using on-board timers relative to at least one trigger channel and at least one of multiple inputs on the crosspoint switch.

In embodiments, the method includes auto-scaling with a peak-detector using a separate analog-to-digital converter for peak detection. In embodiments, the method includes routing at least one trigger channel that is raw and buffered into at least one of multiple inputs on the crosspoint switch. In embodiments, the method includes increasing input oversampling rates with at least one delta-sigma analog-to-digital converter to reduce sampling rate outputs and to minimize anti-aliasing filter requirements. In embodiments, the distributed CPLD chips are each dedicated to the data bus for logic control of the multiple multiplexing units and the multiple data acquisition units and each include a high-frequency crystal clock reference divided by at least one of the distributed CPLD chips for at least one delta-sigma analog-to-digital converter to achieve lower sampling rates without digital resampling. In embodiments, the method includes obtaining long blocks of data at a single relatively high-sampling rate with the local data collection system as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units and each data acquisition unit has an onboard card set that stores calibration information and maintenance history of a data acquisition unit in which the onboard card set is located.

In embodiments, the method includes planning data acquisition routes based on hierarchical templates associated with at least the first element in the first machine in the industrial environment. In embodiments, the local data collection system manages data collection bands that define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system creates data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the method includes controlling a GUI system of the local data collection system to manage the data collection bands. The GUI system includes an expert system diagnostic tool. In embodiments, the computing environment of the platform includes cloud-based, machine pattern analysis of state information from multiple sensors to provide anticipated state information for the industrial environment. In embodiments, the computing environment of the platform provides self-organization of data pools based on at least one of the utilization metrics and yield metrics. In embodiments, the computing environment of the platform includes a self-organized swarm of industrial data collectors. In embodiments, each of multiple inputs of the crosspoint switch is individually assignable to any of multiple outputs of the crosspoint switch.

Methods and systems described herein for industrial machine sensor data streaming, collection, processing, and storage may be configured to operate and integrate with existing data collection, processing and storage systems and may include a method for capturing a plurality of streams of sensed data from sensors deployed to monitor aspects of an industrial machine associated with at least one moving part of the machine; at least one of the streams contains a plurality of frequencies of data. The method may include identifying a subset of data in at least one of the plurality of streams that corresponds to data representing at least one predefined frequency. The at least one predefined frequency is represented by a set of data collected from alternate sensors deployed to monitor aspects of the industrial machine associated with the at least one moving part of the machine. The method may further include processing the identified data with a data processing facility that processes the identified data with an algorithm configured to be applied to the set of data collected from alternate sensors. Lastly, the method may include storing the at least one of the streams of data, the identified subset of data, and a result of processing the identified data in an electronic data set.

Methods and systems described herein for industrial machine sensor data streaming, collection, processing, and storage may be configured to operate and integrate with existing data collection, processing, and storage systems and may include a method for applying data captured from sensors deployed to monitor aspects of an industrial machine associated with at least one moving part of the machine. The data is captured with predefined lines of resolution covering a predefined frequency range and is sent to a frequency matching facility that identifies a subset of data streamed from other sensors deployed to monitor aspects of the industrial machine associated with at least one moving part of the machine. The streamed data includes a plurality of lines of resolution and frequency ranges. The subset of data identified corresponds to the lines of resolution and predefined frequency range. This method may include storing the subset of data in an electronic data record in a format that corresponds to a format of the data captured with predefined lines of resolution and signaling to a data processing facility the presence of the stored subset of data. This method may, optionally, include processing the subset of data with at least one set of algorithms, models and pattern recognizers that corresponds to algorithms, models and pattern recognizers associated with processing the data captured with predefined lines of resolution covering a predefined frequency range.

Methods and systems described herein for industrial machine sensor data streaming, collection, processing, and storage may be configured to operate and integrate with existing data collection, processing and storage systems and may include a method for identifying a subset of streamed sensor data, the sensor data captured from sensors deployed to monitor aspects of an industrial machine associated with at least one moving part of the machine, the subset of streamed sensor data at predefined lines of resolution for a predefined frequency range, and establishing a first logical route for communicating electronically between a first computing facility performing the identifying and a second computing facility, wherein identified subset of the streamed sensor data is communicated exclusively over the established first logical route when communicating the subset of streamed sensor data from the first facility to the second facility. This method may further include establishing a second logical route for communicating electronically between the first computing facility and the second computing facility for at least one portion of the streamed sensor data that is not the identified subset. Additionally, this method may further include establishing a third logical route for communicating electronically between the first computing facility and the second computing facility for at least one portion of the streamed sensor data that includes the identified subset and at least one other portion of the data not represented by the identified subset.

Methods and systems described herein for industrial machine sensor data streaming, collection, processing, and storage may be configured to operate and integrate with existing data collection, processing and storage systems and may include a first data sensing and processing system that captures first data from a first set of sensors deployed to monitor aspects of an industrial machine associated with at least one moving part of the machine, the first data covering a set of lines of resolution and a frequency range. This system may include a second data sensing and processing system that captures and streams a second set of data from a second set of sensors deployed to monitor aspects of the industrial machine associated with at least one moving part of the machine, the second data covering a plurality of lines of resolution that includes the set of lines of resolution and a plurality of frequencies that includes the frequency range. The system may enable selecting a portion of the second data that corresponds to the set of lines of resolution and the frequency range of the first data, and processing the selected portion of the second data with the first data sensing and processing system.

Methods and systems described herein for industrial machine sensor data streaming, collection, processing, and storage may be configured to operate and integrate with existing data collection, processing and storage systems and may include a method for automatically processing a portion of a stream of sensed data. The sensed data is received from a first set of sensors deployed to monitor aspects of an industrial machine associated with at least one moving part of the machine. The sensed data is in response to an electronic data structure that facilitates extracting a subset of the stream of sensed data that corresponds to a set of sensed data received from a second set of sensors deployed to monitor the aspects of the industrial machine associated with the at least one moving part of the machine. The set of sensed data is constrained to a frequency range. The stream of sensed data includes a range of frequencies that exceeds the frequency range of the set of sensed data, the processing comprising executing an algorithm on a portion of the stream of sensed data that is constrained to the frequency range of the set of sensed data, the algorithm configured to process the set of sensed data.

Methods and systems described herein for industrial machine sensor data streaming, collection, processing, and storage may be configured to operate and integrate with existing data collection, processing and storage systems and may include a method for receiving first data from sensors deployed to monitor aspects of an industrial machine associated with at least one moving part of the machine. This method may further include detecting at least one of a frequency range and lines of resolution represented by the first data; receiving a stream of data from sensors deployed to monitor the aspects of the industrial machine associated with the at least one moving part of the machine. The stream of data includes: (1) a plurality of frequency ranges and a plurality of lines of resolution that exceeds the frequency range and the lines of resolution represented by the first data; (2) a set of data extracted from the stream of data that corresponds to at least one of the frequency range and the lines of resolution represented by the first data; and (3) the extracted set of data which is processed with a data processing algorithm that is configured to process data within the frequency range and within the lines of resolution of the first data.

In embodiments, a data collection system in an industrial environment may comprise a data collector communicatively coupled to a plurality of input channels, wherein a collector route determines a subset of the plurality of input channels for data collection, the collector route selected based on a data marketplace indicator; a data storage structured to store a plurality of collector routes and collected data that correspond to the plurality of input channels, wherein the plurality of collector routes each comprise a different data collection routine for the plurality of input channels; a data acquisition circuit structured to interpret a plurality of detection values from the collected data, each of the plurality of detection values corresponding to at least one of the plurality of input channels; and a data analysis circuit structured to analyze the collected data from the plurality of input channels and evaluate a selected collection routine of the data collector based on the analyzed collected data, wherein the selected collection routine is switched to a second collection routine based on a received data marketplace indicator. In embodiments, the received data marketplace indicator may be received from a self-organizing data marketplace for industrial Internet-of-things data that comprises at least in part data collected by the data collection system. The self-organizing data marketplace may be organized based on training a machine-learning self-organizing facility with a training set and feedback from measures of marketplace success with respect to stored collected data. The machine-learning self-organizing facility may learn to improve the measures of success based on determining user favored combinations of collected data through the selection of collection routines from the plurality of collection routines. The machine-learning self-organizing facility may be an expert system utilizing a neural network to classify the collected data for marketplace analysis. The self-organizing data marketplace may utilize a self-organizing data pool comprising data collected by the data collection system, such as where the self-organizing data pool includes a data storage profile with a storage time definition for the collected data, each data storage profile corresponding to at least one of the detection values from data being collected. A network data transport system may interconnect the data collection system and distributed data process facilities of the self-organizing data marketplace. The self-organizing data marketplace may utilize a self-organizing map that creates a topology for the stored collected data. The data storage may include local data acquisition calibration information, and the received data marketplace indictor is at least in part determined by a marketplace success measure based on a market usage of the stored local data acquisition calibration information. The data storage may include local data acquisition maintenance information, and the received data marketplace indictor may at least in part be determined by a marketplace success measure based on a market usage of the stored local data acquisition maintenance information. The data collector may be one of a plurality of self-organized swarm of data collectors, wherein the plurality of self-organized swarm of data collectors organize among themselves to optimize data collection based at least in part on the received data marketplace indicator. The plurality of self-organized swarm of data collectors may coordinate with one another to optimize data collection based at least in part on the received data marketplace indicator. The data collector may receive a trigger signal based on the received data marketplace indicator, such as where the trigger signal sets up a data value trigger level for at least one of the plurality of input channels.

In embodiments, a computer-implemented method for monitoring data collection in an industrial environment may comprise providing a data collector communicatively coupled to a plurality of input channels, wherein a collector route determines a subset of the plurality of input channels for data collection, the collector route selected based on a data marketplace indicator; providing a data storage structured to store a plurality of collector routes and collected data that correspond to the plurality of input channels, wherein the plurality of collector routes each comprise a different data collection routine for the plurality of input channels; providing a data acquisition circuit structured to interpret a plurality of detection values from the collected data, each of the plurality of detection values corresponding to at least one of the plurality of input channels; and providing a data analysis circuit structured to analyze the collected data from the plurality of input channels and evaluate a selected collection routine of the data collector based on the analyzed collected data, wherein the selected collection routine is switched to a second collection routine based on a received data marketplace indicator. In embodiments, the received data marketplace indicator may be received from a self-organizing data marketplace for industrial Internet-of-things data that comprises at least in part data collected by the data collection system. The self-organizing data marketplace may be organized based on training a machine-learning self-organizing facility with a training set and feedback from measures of marketplace success with respect to stored collected data.

In embodiments, a monitoring apparatus for data collection in an industrial environment may comprise a data collector component communicatively coupled to a plurality of input channels, wherein a collector route determines a subset of the plurality of input channels for data collection, the collector route selected based on a data marketplace indicator; a data storage component structured to store a plurality of collector routes and collected data that correspond to the plurality of input channels, wherein the plurality of collector routes each comprise a different data collection routine for the plurality of input channels; a data acquisition component structured to interpret a plurality of detection values from the collected data, each of the plurality of detection values corresponding to at least one of the plurality of input channels; and a data analysis component structured to analyze the collected data from the plurality of input channels and evaluate a selected collection routine of the data collector based on the analyzed collected data, wherein the selected collection routine is switched to a second collection routine based on a received data marketplace indicator. In embodiments, the received data marketplace indicator may be received from a self-organizing data marketplace for industrial Internet-of-things data that comprises at least in part data collected by the data collection system. The self-organizing data marketplace may be organized based on training a machine-learning self-organizing facility with a training set and feedback from measures of marketplace success with respect to stored collected data.

Methods and systems are disclosed herein for continuous ultrasonic monitoring, including providing continuous ultrasonic monitoring of rotating elements and bearings of an energy production facility; for cloud-based systems including machine pattern recognition based on the fusion of remote, analog industrial sensors or machine pattern analysis of state information from multiple analog industrial sensors to provide anticipated state information for an industrial system; for on-device sensor fusion and data storage for industrial IoT devices, including on-device sensor fusion and data storage for an Industrial IoT device, where data from multiple sensors are multiplexed at the device for storage of a fused data stream; and for self-organizing systems including a self-organizing data marketplace for industrial IoT data, including a self-organizing data marketplace for industrial IoT data, where available data elements are organized in the marketplace for consumption by consumers based on training a self-organizing facility with a training set and feedback from measures of marketplace success, for self-organizing data pools, including self-organization of data pools based on utilization and/or yield metrics, including utilization and/or yield metrics that are tracked for a plurality of data pools, a self-organized swarm of industrial data collectors, including a self-organizing swarm of industrial data collectors that organize among themselves to optimize data collection based on the capabilities and conditions of the members of the swarm, a self-organizing collector, including a self-organizing, multi-sensor data collector that can optimize data collection, power and/or yield based on conditions in its environment, a self-organizing storage for a multi-sensor data collector, including self-organizing storage for a multi-sensor data collector for industrial sensor data, a self-organizing network coding for a multi-sensor data network, including self-organizing network coding for a data network that transports data from multiple sensors in an industrial data collection environment.

Methods and systems are disclosed herein for training artificial intelligence ("AI") models based on industry-specific feedback, including training an AI model based on industry-specific feedback that reflects a measure of utilization, yield, or impact, where the AI model operates on sensor data from an industrial environment; for an industrial IoT distributed ledger, including a distributed ledger supporting the tracking of transactions executed in an automated data marketplace for industrial IoT data; for a network-sensitive collector, including a network condition-sensitive, self-organizing, multi-sensor data collector that can optimize based on bandwidth, quality of service, pricing, and/or other network conditions; for a remotely organized universal data collector that can power up and down sensor interfaces based on need and/or conditions identified in an industrial data collection environment; and for a haptic or multi-sensory user interface, including a wearable haptic or multi-sensory user interface for an industrial sensor data collector, with vibration, heat, electrical, and/or sound outputs.

Methods and systems are disclosed herein for a presentation layer for augmented reality and virtual reality (AR/VR) industrial glasses, where heat map elements are presented based on patterns and/or parameters in collected data; and for condition-sensitive, self-organized tuning of AR/VR interfaces based on feedback metrics and/or training in industrial environments.

In embodiments, a system for data collection, processing, and utilization of signals from at least a first element in a first machine in an industrial environment includes a platform including a computing environment connected to a local data collection system having at least a first sensor signal and a second sensor signal obtained from at least the first machine in the industrial environment. The system includes a first sensor in the local data collection system configured to be connected to the first machine and a second sensor in the local data collection system. The system further includes a cross-point switch in the local data collection system having multiple inputs and multiple outputs including a first input connected to the first sensor and a second input connected to the second sensor. Throughout the present disclosure, wherever a crosspoint switch, multiplexer (MUX) device, or other multiple-input multiple-output data collection or communication device is described, any multi-sensor acquisition device is also contemplated herein. In certain embodiments, a multi-sensor acquisition device includes one or more channels configured for, or compatible with, an analog sensor input. The multiple outputs include a first output and second output configured to be switchable between a condition in which the first output is configured to switch between delivery of the first sensor signal and the second sensor signal and a condition in which there is simultaneous delivery of the first sensor signal from the first output and the second sensor signal from the second output. Each of multiple inputs is configured to be individually assigned to any of the multiple outputs, or combined in any subsets of the inputs to the outputs. Unassigned outputs are configured to be switched off, for example by producing a high-impedance state.

In embodiments, the first sensor signal and the second sensor signal are continuous vibration data about the industrial environment. In embodiments, the second sensor in the local data collection system is configured to be connected to the first machine. In embodiments, the second sensor in the local data collection system is configured to be connected to a second machine in the industrial environment. In embodiments, the computing environment of the platform is configured to compare relative phases of the first and second sensor signals. In embodiments, the first sensor is a single-axis sensor and the second sensor is a three-axis sensor. In embodiments, at least one of the multiple inputs of the crosspoint switch includes internet protocol, front-end signal conditioning, for improved signal-to-noise ratio. In embodiments, the crosspoint switch includes a third input that is configured with a continuously monitored alarm having a pre-determined trigger condition when the third input is unassigned to or undetected at any of the multiple outputs.

In embodiments, the local data collection system includes multiple multiplexing units and multiple data acquisition units receiving multiple data streams from multiple machines in the industrial environment. In embodiments, the local data collection system includes distributed complex programmable hardware device ("CPLD") chips each dedicated to a data bus for logic control of the multiple multiplexing units and the multiple data acquisition units that receive the multiple data streams from the multiple machines in the industrial environment. In embodiments, the local data collection system is configured to provide high-amperage input capability using solid state relays. In embodiments, the local data collection system is configured to power-down at least one of an analog sensor channel and a component board.

In embodiments, the local data collection system includes a phase-lock loop bandpass tracking filter configured to obtain slow-speed revolutions per minute ("RPMs") and phase information. In embodiments, the local data collection system is configured to digitally derive phase using on-board timers relative to at least one trigger channel and at least one of the multiple inputs. In embodiments, the local data collection system includes a peak-detector configured to autoscale using a separate analog-to-digital converter for peak detection. In embodiments, the local data collection system is configured to route at least one trigger channel that is raw and buffered into at least one of the multiple inputs. In embodiments, the local data collection system includes at least one delta-sigma analog-to-digital converter that is configured to increase input oversampling rates to reduce sampling rate outputs and to minimize anti-aliasing filter requirements. In embodiments, the distributed CPLD chips each dedicated to the data bus for logic control of the multiple multiplexing units and the multiple data acquisition units includes as high-frequency crystal clock reference configured to be divided by at least one of the distributed CPLD chips for at least one delta-sigma analog-to-digital converter to achieve lower sampling rates without digital resampling.

In embodiments, the local data collection system is configured to obtain long blocks of data at a single relatively high-sampling rate as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units each having an onboard card set configured to store calibration information and maintenance history of a data acquisition unit in which the onboard card set is located. In embodiments, the local data collection system is configured to plan data acquisition routes based on hierarchical templates.

In embodiments, the local data collection system is configured to manage data collection bands. In embodiments, the data collection bands define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system is configured to create data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the local data collection system includes a graphical user interface ("GUI") system configured to manage the data collection bands. In embodiments, the GUI system includes an expert system diagnostic tool. In embodiments, the platform includes cloud-based, machine pattern analysis of state information from multiple sensors to provide anticipated state information for the industrial environment. In embodiments, the platform is configured to provide self-organization of data pools based on at least one of the utilization metrics and yield metrics. In embodiments, the platform includes a self-organized swarm of industrial data collectors. In embodiments, the local data collection system includes a wearable haptic user interface for an industrial sensor data collector with at least one of vibration, heat, electrical, and sound outputs.

In embodiments, multiple inputs of the crosspoint switch include a third input connected to the second sensor and a fourth input connected to the second sensor. The first sensor signal is from a single-axis sensor at an unchanging location associated with the first machine. In embodiments, the second sensor is a three-axis sensor. In embodiments, the local data collection system is configured to record gap-free digital waveform data simultaneously from at least the first input, the second input, the third input, and the fourth input. In embodiments, the platform is configured to determine a change in relative phase based on the simultaneously recorded gap-free digital waveform data. In embodiments, the second sensor is configured to be movable to a plurality of positions associated with the first machine while obtaining the simultaneously recorded gap-free digital waveform data. In embodiments, multiple outputs of the crosspoint switch include a third output and fourth output. The second, third, and fourth outputs are assigned together to a sequence of tri-axial sensors each located at different positions associated with the machine. In embodiments, the platform is configured to determine an operating deflection shape based on the change in relative phase and the simultaneously recorded gap-free digital waveform data.

In embodiments, the unchanging location is a position associated with the rotating shaft of the first machine. In embodiments, tri-axial sensors in the sequence of the tri-axial sensors are each located at different positions on the first machine but are each associated with different bearings in the machine. In embodiments, tri-axial sensors in the sequence of the tri-axial sensors are each located at similar positions associated with similar bearings but are each associated with different machines. In embodiments, the local data collection system is configured to obtain the simultaneously recorded gap-free digital waveform data from the first machine while the first machine and a second machine are both in operation. In embodiments, the local data collection system is configured to characterize a contribution from the first machine and the second machine in the simultaneously recorded gap-free digital waveform data from the first machine. In embodiments, the simultaneously recorded gap-free digital waveform data has a duration that is in excess of one minute.

In embodiments, a method of monitoring a machine having at least one shaft supported by a set of bearings includes monitoring a first data channel assigned to a single-axis sensor at an unchanging location associated with the machine. The method includes monitoring second, third, and fourth data channels each assigned to an axis of a three-axis sensor. The method includes recording gap-free digital waveform data simultaneously from all of the data channels while the machine is in operation and determining a change in relative phase based on the digital waveform data.

In embodiments, the tri-axial sensor is located at a plurality of positions associated with the machine while obtaining the digital waveform. In embodiments, the second, third, and fourth channels are assigned together to a sequence of tri-axial sensors each located at different positions associated with the machine. In embodiments, the data is received from all of the sensors simultaneously. In embodiments, the method includes determining an operating deflection shape based on the change in relative phase information and the waveform data. In embodiments, the unchanging location is a position associated with the shaft of the machine. In embodiments, the tri-axial sensors in the sequence of the tri-axial sensors are each located at different positions and are each associated with different bearings in the machine. In embodiments, the unchanging location is a position associated with the shaft of the machine. The tri-axial sensors in the sequence of the tri-axial sensors are each located at different positions and are each associated with different bearings that support the shaft in the machine.

In embodiments, the method includes monitoring the first data channel assigned to the single-axis sensor at an unchanging location located on a second machine. The method includes monitoring the second, the third, and the fourth data channels, each assigned to the axis of a three-axis sensor that is located at the position associated with the second machine. The method also includes recording gap-free digital waveform data simultaneously from all of the data channels from the second machine while both of the machines are in operation. In embodiments, the method includes characterizing the contribution from each of the machines in the gap-free digital waveform data simultaneously from the second machine.

In embodiments, a method for data collection, processing, and utilization of signals with a platform monitoring at least a first element in a first machine in an industrial environment includes obtaining, automatically with a computing environment, at least a first sensor signal and a second sensor signal with a local data collection system that monitors at least the first machine. The method includes connecting a first input of a crosspoint switch of the local data collection system to a first sensor and a second input of the crosspoint switch to a second sensor in the local data collection system. The method includes switching between a condition in which a first output of the crosspoint switch alternates between delivery of at least the first sensor signal and the second sensor signal and a condition in which there is simultaneous delivery of the first sensor signal from the first output and the second sensor signal from a second output of the crosspoint switch. The method also includes switching off unassigned outputs of the crosspoint switch into a high-impedance state.

In embodiments, the first sensor signal and the second sensor signal are continuous vibration data from the industrial environment. In embodiments, the second sensor in the local data collection system is connected to the first machine. In embodiments, the second sensor in the local data collection system is connected to a second machine in the industrial environment. In embodiments, the method includes comparing, automatically with the computing environment, relative phases of the first and second sensor signals. In embodiments, the first sensor is a single-axis sensor and the second sensor is a three-axis sensor. In embodiments, at least the first input of the crosspoint switch includes internet protocol front-end signal conditioning for improved signal-to-noise ratio.

In embodiments, the method includes continuously monitoring at least a third input of the crosspoint switch with an alarm having a pre-determined trigger condition when the third input is unassigned to any of multiple outputs on the crosspoint switch. In embodiments, the local data collection system includes multiple multiplexing units and multiple data acquisition units receiving multiple data streams from multiple machines in the industrial environment. In embodiments, the local data collection system includes distributed CPLD chips each dedicated to a data bus for logic control of the multiple multiplexing units and the multiple data acquisition units that receive the multiple data streams from the multiple machines in the industrial environment. In embodiments, the local data collection system provides high-amperage input capability using solid state relays.

In embodiments, the method includes powering down at least one of an analog sensor channel and a component board of the local data collection system. In embodiments, the local data collection system includes an external voltage reference for an A/D zero reference that is independent of the voltage of the first sensor and the second sensor. In embodiments, the local data collection system includes a phase-lock loop bandpass tracking filter that obtains slow-speed RPMs and phase information. In embodiments, the method includes digitally deriving phase using on-board timers relative to at least one trigger channel and at least one of multiple inputs on the crosspoint switch.

In embodiments, the method includes auto-scaling with a peak-detector using a separate analog-to-digital converter for peak detection. In embodiments, the method includes routing at least one trigger channel that is raw and buffered into at least one of multiple inputs on the crosspoint switch. In embodiments, the method includes increasing input oversampling rates with at least one delta-sigma analog-to-digital converter to reduce sampling rate outputs and to minimize anti-aliasing filter requirements. In embodiments, the distributed CPLD chips are each dedicated to the data bus for logic control of the multiple multiplexing units and the multiple data acquisition units and each include a high-frequency crystal clock reference divided by at least one of the distributed CPLD chips for at least one delta-sigma analog-to-digital converter to achieve lower sampling rates without digital resampling. In embodiments, the method includes obtaining long blocks of data at a single relatively high-sampling rate with the local data collection system as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units and each data acquisition unit has an onboard card set that stores calibration information and maintenance history of a data acquisition unit in which the onboard card set is located.

In embodiments, the method includes planning data acquisition routes based on hierarchical templates associated with at least the first element in the first machine in the industrial environment. In embodiments, the local data collection system manages data collection bands that define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system creates data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the method includes controlling a GUI system of the local data collection system to manage the data collection bands. The GUI system includes an expert system diagnostic tool. In embodiments, the computing environment of the platform includes cloud-based, machine pattern analysis of state information from multiple sensors to provide anticipated state information for the industrial environment. In embodiments, the computing environment of the platform provides self-organization of data pools based on at least one of the utilization metrics and yield metrics. In embodiments, the computing environment of the platform includes a self-organized swarm of industrial data collectors. In embodiments, each of multiple inputs of the crosspoint switch is individually assignable to any of multiple outputs of the crosspoint switch.

Methods and systems described herein for industrial machine sensor data streaming, collection, processing, and storage may be configured to operate and integrate with existing data collection, processing and storage systems and may include a method for capturing a plurality of streams of sensed data from sensors deployed to monitor aspects of an industrial machine associated with at least one moving part of the machine; at least one of the streams contains a plurality of frequencies of data. The method may include identifying a subset of data in at least one of the plurality of streams that corresponds to data representing at least one predefined frequency. The at least one predefined frequency is represented by a set of data collected from alternate sensors deployed to monitor aspects of the industrial machine associated with the at least one moving part of the machine. The method may further include processing the identified data with a data processing facility that processes the identified data with an algorithm configured to be applied to the set of data collected from alternate sensors. Lastly, the method may include storing the at least one of the streams of data, the identified subset of data, and a result of processing the identified data in an electronic data set.

Methods and systems described herein for industrial machine sensor data streaming, collection, processing, and storage may be configured to operate and integrate with existing data collection, processing, and storage systems and may include a method for applying data captured from sensors deployed to monitor aspects of an industrial machine associated with at least one moving part of the machine. The data is captured with predefined lines of resolution covering a predefined frequency range and is sent to a frequency matching facility that identifies a subset of data streamed from other sensors deployed to monitor aspects of the industrial machine associated with at least one moving part of the machine. The streamed data includes a plurality of lines of resolution and frequency ranges. The subset of data identified corresponds to the lines of resolution and predefined frequency range. This method may include storing the subset of data in an electronic data record in a format that corresponds to a format of the data captured with predefined lines of resolution and signaling to a data processing facility the presence of the stored subset of data. This method may, optionally, include processing the subset of data with at least one set of algorithms, models and pattern recognizers that corresponds to algorithms, models and pattern recognizers associated with processing the data captured with predefined lines of resolution covering a predefined frequency range.

Methods and systems described herein for industrial machine sensor data streaming, collection, processing, and storage may be configured to operate and integrate with existing data collection, processing and storage systems and may include a method for identifying a subset of streamed sensor data, the sensor data captured from sensors deployed to monitor aspects of an industrial machine associated with at least one moving part of the machine, the subset of streamed sensor data at predefined lines of resolution for a predefined frequency range, and establishing a first logical route for communicating electronically between a first computing facility performing the identifying and a second computing facility, wherein identified subset of the streamed sensor data is communicated exclusively over the established first logical route when communicating the subset of streamed sensor data from the first facility to the second facility. This method may further include establishing a second logical route for communicating electronically between the first computing facility and the second computing facility for at least one portion of the streamed sensor data that is not the identified subset. Additionally, this method may further include establishing a third logical route for communicating electronically between the first computing facility and the second computing facility for at least one portion of the streamed sensor data that includes the identified subset and at least one other portion of the data not represented by the identified subset.

Methods and systems described herein for industrial machine sensor data streaming, collection, processing, and storage may be configured to operate and integrate with existing data collection, processing and storage systems and may include a first data sensing and processing system that captures first data from a first set of sensors deployed to monitor aspects of an industrial machine associated with at least one moving part of the machine, the first data covering a set of lines of resolution and a frequency range. This system may include a second data sensing and processing system that captures and streams a second set of data from a second set of sensors deployed to monitor aspects of the industrial machine associated with at least one moving part of the machine, the second data covering a plurality of lines of resolution that includes the set of lines of resolution and a plurality of frequencies that includes the frequency range. The system may enable selecting a portion of the second data that corresponds to the set of lines of resolution and the frequency range of the first data, and processing the selected portion of the second data with the first data sensing and processing system.

Methods and systems described herein for industrial machine sensor data streaming, collection, processing, and storage may be configured to operate and integrate with existing data collection, processing and storage systems and may include a method for automatically processing a portion of a stream of sensed data. The sensed data is received from a first set of sensors deployed to monitor aspects of an industrial machine associated with at least one moving part of the machine. The sensed data is in response to an electronic data structure that facilitates extracting a subset of the stream of sensed data that corresponds to a set of sensed data received from a second set of sensors deployed to monitor the aspects of the industrial machine associated with the at least one moving part of the machine. The set of sensed data is constrained to a frequency range. The stream of sensed data includes a range of frequencies that exceeds the frequency range of the set of sensed data, the processing comprising executing an algorithm on a portion of the stream of sensed data that is constrained to the frequency range of the set of sensed data, the algorithm configured to process the set of sensed data.

Methods and systems described herein for industrial machine sensor data streaming, collection, processing, and storage may be configured to operate and integrate with existing data collection, processing and storage systems and may include a method for receiving first data from sensors deployed to monitor aspects of an industrial machine associated with at least one moving part of the machine. This method may further include detecting at least one of a frequency range and lines of resolution represented by the first data; receiving a stream of data from sensors deployed to monitor the aspects of the industrial machine associated with the at least one moving part of the machine. The stream of data includes: (1) a plurality of frequency ranges and a plurality of lines of resolution that exceeds the frequency range and the lines of resolution represented by the first data; (2) a set of data extracted from the stream of data that corresponds to at least one of the frequency range and the lines of resolution represented by the first data; and (3) the extracted set of data which is processed with a data processing algorithm that is configured to process data within the frequency range and within the lines of resolution of the first data.

In embodiments, a data collection system in an industrial environment may comprise a data collector communicatively coupled to a plurality of input channels, wherein at least one of the input channels is connected to a vibration detection facility for detecting a noise pattern from a first industrial machine of a plurality of industrial machines; a data storage structured to store a plurality of noise patterns from the plurality of industrial machines in a library of noise patterns; a data acquisition circuit structured to interpret a plurality of detection values from the collected data, each of the plurality of detection values corresponding to at least one of the plurality of input channels; and a data analysis circuit structured to analyze the collected data from the plurality of input channels to determine if the noise pattern from the first industrial machine matches a noise pattern of a second industrial machine stored in the library of noise patterns, wherein the noise pattern of the second industrial machine is characteristic of a machine performance category, wherein if the noise pattern from the first industrial machine matches the noise pattern of the second industrial machine, then an alarm condition is set to indicate the first industrial machine is experiencing a condition characteristic of the machine performance category of the second industrial machine. In embodiments, the machine performance category may be a machine start-up category, a machine shut-down category, a normal machine operation category, an operational failure mode category, and the like. The library of noise patterns may be available to a noise pattern marketplace, such as where users are provided access to the library of noise patterns for identification of a machine performance category of a measured noise pattern based on a stored noise pattern. The stored noise pattern may be stored in the library of noise patterns and the measured noise pattern is a measured noise pattern collected by the data collection system. The noise pattern marketplace may be a self-organizing marketplace organized based on a machine-learning self-organizing facility that learns based on measures of marketplace success with respect to stored collected data. The self-organizing data marketplace may utilize a self-organizing data pool, such as including data collected by the data collection system. The data analysis circuit may utilize a noise pattern analysis to determine if the noise pattern from the first industrial machine matches a noise pattern of the second industrial machine stored in the library of noise patterns. The data analysis circuit may utilize a stored vibration fingerprint to determine if the noise pattern from the first industrial machine matches a noise pattern of the second industrial machine stored in the library of noise patterns. The data collector may be one of a plurality of self-organized swarm of data collectors, where the plurality of self-organized swarm of data collectors organize among themselves to optimize data collection based at least in part on noise pattern analysis of the collected data. A frequency evaluation circuit may be included and structured to detect a signal on one of the plurality of input channels at frequencies higher than a frequency at which a monitored equipment vibrates. The monitoring system may include at least one delta-sigma analog-to-digital converter that is configured to increase input over-

sampling rates. The vibration detection facility may analyze frequency components in detecting the noise pattern from the first industrial machine. One of the plurality of input channels may provide for a gap-free digital waveform from which the data analysis circuit analyzes the collected data. The data analysis circuit may analyze a first and a second of the plurality of input channels for a relative phase determination from which the data analysis circuit analyzes the collected data.

In embodiments, a computer-implemented method for data collection in an industrial environment may comprise a data collector communicatively coupled to a plurality of input channels, wherein at least one of the input channels is connected to a vibration detection facility for detecting a noise pattern from a first industrial machine of a plurality of industrial machines; a data storage structured to store a plurality of noise patterns from the plurality of industrial machines in a library of noise patterns; a data acquisition circuit structured to interpret a plurality of detection values from the collected data, each of the plurality of detection values corresponding to at least one of the plurality of input channels; and a data analysis circuit structured to analyze the collected data from the plurality of input channels to determine if the noise pattern from the first industrial machine matches a noise pattern of a second industrial machine stored in the library of noise patterns, wherein the noise pattern of the second industrial machine is characteristic of a machine performance category, wherein if the noise pattern from the first industrial machine matches the noise pattern of the second industrial machine, then an alarm condition is set to indicate the first industrial machine is experiencing a condition characteristic of the machine performance category of the second industrial machine. In embodiments, the machine performance category may be a machine start-up category, a machine shut-down category, a normal machine operation category, an operational failure mode category, and the like. The library of noise patterns may be available to a noise pattern marketplace, such as where users are provided access to the library of noise patterns for identification of a machine performance category of a measured noise pattern based on a stored noise pattern.

In embodiments, a monitoring apparatus for data collection in an industrial environment may comprise a data collector component communicatively coupled to a plurality of input channels, wherein at least one of the input channels is connected to a vibration detection facility for detecting a noise pattern from a first industrial machine of a plurality of industrial machines; a data storage component structured to store a plurality of noise patterns from the plurality of industrial machines in a library of noise patterns; a data acquisition component structured to interpret a plurality of detection values from the collected data, each of the plurality of detection values corresponding to at least one of the plurality of input channels; and a data analysis component structured to analyze the collected data from the plurality of input channels to determine if the noise pattern from the first industrial machine matches a noise pattern of a second industrial machine stored in the library of noise patterns, wherein the noise pattern of the second industrial machine is characteristic of a machine performance category, wherein if the noise pattern from the first industrial machine matches the noise pattern of the second industrial machine, then an alarm condition is set to indicate the first industrial machine is experiencing a condition characteristic of the machine performance category of the second industrial machine. In embodiments, the machine performance category may be a machine start-up category, a machine shut-down category, a normal machine operation category, an operational failure mode category, and the like. The library of noise patterns may be available to a noise pattern marketplace, such as where users are provided access to the library of noise patterns for identification of a machine performance category of a measured noise pattern based on a stored noise pattern.

Methods and systems are disclosed herein for continuous ultrasonic monitoring, including providing continuous ultrasonic monitoring of rotating elements and bearings of an energy production facility; for cloud-based systems including machine pattern recognition based on the fusion of remote, analog industrial sensors or machine pattern analysis of state information from multiple analog industrial sensors to provide anticipated state information for an industrial system; for on-device sensor fusion and data storage for industrial IoT devices, including on-device sensor fusion and data storage for an Industrial IoT device, where data from multiple sensors are multiplexed at the device for storage of a fused data stream; and for self-organizing systems including a self-organizing data marketplace for industrial IoT data, including a self-organizing data marketplace for industrial IoT data, where available data elements are organized in the marketplace for consumption by consumers based on training a self-organizing facility with a training set and feedback from measures of marketplace success, for self-organizing data pools, including self-organization of data pools based on utilization and/or yield metrics, including utilization and/or yield metrics that are tracked for a plurality of data pools, a self-organized swarm of industrial data collectors, including a self-organizing swarm of industrial data collectors that organize among themselves to optimize data collection based on the capabilities and conditions of the members of the swarm, a self-organizing collector, including a self-organizing, multi-sensor data collector that can optimize data collection, power and/or yield based on conditions in its environment, a self-organizing storage for a multi-sensor data collector, including self-organizing storage for a multi-sensor data collector for industrial sensor data, a self-organizing network coding for a multi-sensor data network, including self-organizing network coding for a data network that transports data from multiple sensors in an industrial data collection environment.

Methods and systems are disclosed herein for training artificial intelligence ("AI") models based on industry-specific feedback, including training an AI model based on industry-specific feedback that reflects a measure of utilization, yield, or impact, where the AI model operates on sensor data from an industrial environment; for an industrial IoT distributed ledger, including a distributed ledger supporting the tracking of transactions executed in an automated data marketplace for industrial IoT data; for a network-sensitive collector, including a network condition-sensitive, self-organizing, multi-sensor data collector that can optimize based on bandwidth, quality of service, pricing, and/or other network conditions; for a remotely organized universal data collector that can power up and down sensor interfaces based on need and/or conditions identified in an industrial data collection environment; and for a haptic or multi-sensory user interface, including a wearable haptic or multi-sensory user interface for an industrial sensor data collector, with vibration, heat, electrical, and/or sound outputs.

Methods and systems are disclosed herein for a presentation layer for augmented reality and virtual reality (AR/VR) industrial glasses, where heat map elements are presented based on patterns and/or parameters in collected data; and for condition-sensitive, self-organized tuning of AR/VR interfaces based on feedback metrics and/or training in industrial environments.

In embodiments, a system for data collection, processing, and utilization of signals from at least a first element in a first machine in an industrial environment includes a platform including a computing environment connected to a local data collection system having at least a first sensor signal and a second sensor signal obtained from at least the first machine in the industrial environment. The system includes a first sensor in the local data collection system configured to be connected to the first machine and a second sensor in the local data collection system. The system further includes a crosspoint switch in the local data collection system having multiple inputs and multiple outputs including a first input connected to the first sensor and a second input connected to the second sensor. Throughout the present disclosure, wherever a crosspoint switch, multiplexer (MUX) device, or other multiple-input multiple-output data collection or communication device is described, any multi-sensor acquisition device is also contemplated herein. In certain embodiments, a multi-sensor acquisition device includes one or more channels configured for, or compatible with, an analog sensor input. The multiple outputs include a first output and second output configured to be switchable between a condition in which the first output is configured to switch between delivery of the first sensor signal and the second sensor signal and a condition in which there is simultaneous delivery of the first sensor signal from the first output and the second sensor signal from the second output. Each of multiple inputs is configured to be individually assigned to any of the multiple outputs, or combined in any subsets of the inputs to the outputs. Unassigned outputs are configured to be switched off, for example by producing a high-impedance state.

In embodiments, the first sensor signal and the second sensor signal are continuous vibration data about the industrial environment. In embodiments, the second sensor in the local data collection system is configured to be connected to the first machine. In embodiments, the second sensor in the local data collection system is configured to be connected to a second machine in the industrial environment. In embodiments, the computing environment of the platform is configured to compare relative phases of the first and second sensor signals. In embodiments, the first sensor is a single-axis sensor and the second sensor is a three-axis sensor. In embodiments, at least one of the multiple inputs of the crosspoint switch includes internet protocol, front-end signal conditioning, for improved signal-to-noise ratio. In embodiments, the crosspoint switch includes a third input that is configured with a continuously monitored alarm having a pre-determined trigger condition when the third input is unassigned to or undetected at any of the multiple outputs.

In embodiments, the local data collection system includes multiple multiplexing units and multiple data acquisition units receiving multiple data streams from multiple machines in the industrial environment. In embodiments, the local data collection system includes distributed complex programmable hardware device ("CPLD") chips each dedicated to a data bus for logic control of the multiple multiplexing units and the multiple data acquisition units that receive the multiple data streams from the multiple machines in the industrial environment. In embodiments, the local data collection system is configured to provide high-amperage input capability using solid state relays. In embodiments, the local data collection system is configured to power-down at least one of an analog sensor channel and a component board.

In embodiments, the local data collection system includes a phase-lock loop bandpass tracking filter configured to obtain slow-speed revolutions per minute ("RPMs") and phase information. In embodiments, the local data collection system is configured to digitally derive phase using on-board timers relative to at least one trigger channel and at least one of the multiple inputs. In embodiments, the local data collection system includes a peak-detector configured to autoscale using a separate analog-to-digital converter for peak detection. In embodiments, the local data collection system is configured to route at least one trigger channel that is raw and buffered into at least one of the multiple inputs. In embodiments, the local data collection system includes at least one delta-sigma analog-to-digital converter that is configured to increase input oversampling rates to reduce sampling rate outputs and to minimize anti-aliasing filter requirements. In embodiments, the distributed CPLD chips each dedicated to the data bus for logic control of the multiple multiplexing units and the multiple data acquisition units includes as high-frequency crystal clock reference configured to be divided by at least one of the distributed CPLD chips for at least one delta-sigma analog-to-digital converter to achieve lower sampling rates without digital resampling.

In embodiments, the local data collection system is configured to obtain long blocks of data at a single relatively high-sampling rate as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units each having an onboard card set configured to store calibration information and maintenance history of a data acquisition unit in which the onboard card set is located. In embodiments, the local data collection system is configured to plan data acquisition routes based on hierarchical templates.

In embodiments, the local data collection system is configured to manage data collection bands. In embodiments, the data collection bands define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system is configured to create data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the local data collection system includes a graphical user interface ("GUI") system configured to manage the data collection bands. In embodiments, the GUI system includes an expert system diagnostic tool. In embodiments, the platform includes cloud-based, machine pattern analysis of state information from multiple sensors to provide anticipated state information for the industrial environment. In embodiments, the platform is configured to provide self-organization of data pools based on at least one of the utilization metrics and yield metrics. In embodiments, the platform includes a self-organized swarm of industrial data collectors. In embodiments, the local data collection system includes a wearable haptic user interface for an industrial sensor data collector with at least one of vibration, heat, electrical, and sound outputs.

In embodiments, multiple inputs of the crosspoint switch include a third input connected to the second sensor and a fourth input connected to the second sensor. The first sensor signal is from a single-axis sensor at an unchanging location associated with the first machine. In embodiments, the second sensor is a three-axis sensor. In embodiments, the local data collection system is configured to record gap-free digital waveform data simultaneously from at least the first input, the second input, the third input, and the fourth input. In embodiments, the platform is configured to determine a change in relative phase based on the simultaneously recorded gap-free digital waveform data. In embodiments, the second sensor is configured to be movable to a plurality of positions associated with the first machine while obtaining the simultaneously recorded gap-free digital waveform data. In embodiments, multiple outputs of the crosspoint switch include a third output and fourth output. The second, third, and fourth outputs are assigned together to a sequence of tri-axial sensors each located at different positions associated with the machine. In embodiments, the platform is configured to determine an operating deflection shape based on the change in relative phase and the simultaneously recorded gap-free digital waveform data.

In embodiments, the unchanging location is a position associated with the rotating shaft of the first machine. In embodiments, tri-axial sensors in the sequence of the tri-axial sensors are each located at different positions on the first machine but are each associated with different bearings in the machine. In embodiments, tri-axial sensors in the sequence of the tri-axial sensors are each located at similar positions associated with similar bearings but are each associated with different machines. In embodiments, the local data collection system is configured to obtain the simultaneously recorded gap-free digital waveform data from the first machine while the first machine and a second machine are both in operation. In embodiments, the local data collection system is configured to characterize a contribution from the first machine and the second machine in the simultaneously recorded gap-free digital waveform data from the first machine. In embodiments, the simultaneously recorded gap-free digital waveform data has a duration that is in excess of one minute.

In embodiments, a method of monitoring a machine having at least one shaft supported by a set of bearings includes monitoring a first data channel assigned to a single-axis sensor at an unchanging location associated with the machine. The method includes monitoring second, third, and fourth data channels each assigned to an axis of a three-axis sensor. The method includes recording gap-free digital waveform data simultaneously from all of the data channels while the machine is in operation and determining a change in relative phase based on the digital waveform data.

In embodiments, the tri-axial sensor is located at a plurality of positions associated with the machine while obtaining the digital waveform. In embodiments, the second, third, and fourth channels are assigned together to a sequence of tri-axial sensors each located at different positions associated with the machine. In embodiments, the data is received from all of the sensors simultaneously. In embodiments, the method includes determining an operating deflection shape based on the change in relative phase information and the waveform data. In embodiments, the unchanging location is a position associated with the shaft of the machine. In embodiments, the tri-axial sensors in the sequence of the tri-axial sensors are each located at different positions and are each associated with different bearings in the machine. In embodiments, the unchanging location is a position associated with the shaft of the machine. The tri-axial sensors in the sequence of the tri-axial sensors are each located at different positions and are each associated with different bearings that support the shaft in the machine.

In embodiments, the method includes monitoring the first data channel assigned to the single-axis sensor at an unchanging location located on a second machine. The method includes monitoring the second, the third, and the fourth data channels, each assigned to the axis of a three-axis sensor that is located at the position associated with the second machine. The method also includes recording gap-free digital waveform data simultaneously from all of the data channels from the second machine while both of the machines are in operation. In embodiments, the method includes characterizing the contribution from each of the machines in the gap-free digital waveform data simultaneously from the second machine.

In embodiments, a method for data collection, processing, and utilization of signals with a platform monitoring at least a first element in a first machine in an industrial environment includes obtaining, automatically with a computing environment, at least a first sensor signal and a second sensor signal with a local data collection system that monitors at least the first machine. The method includes connecting a first input of a crosspoint switch of the local data collection system to a first sensor and a second input of the crosspoint switch to a second sensor in the local data collection system. The method includes switching between a condition in which a first output of the crosspoint switch alternates between delivery of at least the first sensor signal and the second sensor signal and a condition in which there is simultaneous delivery of the first sensor signal from the first output and the second sensor signal from a second output of the crosspoint switch. The method also includes switching off unassigned outputs of the crosspoint switch into a high-impedance state.

In embodiments, the first sensor signal and the second sensor signal are continuous vibration data from the industrial environment. In embodiments, the second sensor in the local data collection system is connected to the first machine. In embodiments, the second sensor in the local data collection system is connected to a second machine in the industrial environment. In embodiments, the method includes comparing, automatically with the computing environment, relative phases of the first and second sensor signals. In embodiments, the first sensor is a single-axis sensor and the second sensor is a three-axis sensor. In embodiments, at least the first input of the crosspoint switch includes internet protocol front-end signal conditioning for improved signal-to-noise ratio.

In embodiments, the method includes continuously monitoring at least a third input of the crosspoint switch with an alarm having a pre-determined trigger condition when the third input is unassigned to any of multiple outputs on the crosspoint switch. In embodiments, the local data collection system includes multiple multiplexing units and multiple data acquisition units receiving multiple data streams from multiple machines in the industrial environment. In embodiments, the local data collection system includes distributed CPLD chips each dedicated to a data bus for logic control of the multiple multiplexing units and the multiple data acquisition units that receive the multiple data streams from the multiple machines in the industrial environment. In embodiments, the local data collection system provides high-amperage input capability using solid state relays.

In embodiments, the method includes powering down at least one of an analog sensor channel and a component board of the local data collection system. In embodiments, the local data collection system includes an external voltage reference for an A/D zero reference that is independent of the voltage of the first sensor and the second sensor. In embodiments, the local data collection system includes a phase-lock loop bandpass tracking filter that obtains slow-speed RPMs and phase information. In embodiments, the method includes digitally deriving phase using on-board timers relative to at least one trigger channel and at least one of multiple inputs on the crosspoint switch.

In embodiments, the method includes autoscaling with a peak-detector using a separate analog-to-digital converter for peak detection. In embodiments, the method includes routing at least one trigger channel that is raw and buffered into at least one of multiple inputs on the crosspoint switch. In embodiments, the method includes increasing input oversampling rates with at least one delta-sigma analog-to-digital converter to reduce sampling rate outputs and to minimize anti-aliasing filter requirements. In embodiments, the distributed CPLD chips are each dedicated to the data bus for logic control of the multiple multiplexing units and the multiple data acquisition units and each include a high-frequency crystal clock reference divided by at least one of the distributed CPLD chips for at least one delta-sigma analog-to-digital converter to achieve lower sampling rates without digital resampling. In embodiments, the method includes obtaining long blocks of data at a single relatively high-sampling rate with the local data collection system as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units and each data acquisition unit has an onboard card set that stores calibration information and maintenance history of a data acquisition unit in which the onboard card set is located.

In embodiments, the method includes planning data acquisition routes based on hierarchical templates associated with at least the first element in the first machine in the industrial environment. In embodiments, the local data collection system manages data collection bands that define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system creates data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the method includes controlling a GUI system of the local data collection system to manage the data collection bands. The GUI system includes an expert system diagnostic tool. In embodiments, the computing environment of the platform includes cloud-based, machine pattern analysis of state information from multiple sensors to provide anticipated state information for the industrial environment. In embodiments, the computing environment of the platform provides self-organization of data pools based on at least one of the utilization metrics and yield metrics. In embodiments, the computing environment of the platform includes a self-organized swarm of industrial data collectors. In embodiments, each of multiple inputs of the crosspoint switch is individually assignable to any of multiple outputs of the crosspoint switch.

Methods and systems described herein for industrial machine sensor data streaming, collection, processing, and storage may be configured to operate and integrate with existing data collection, processing and storage systems and may include a method for capturing a plurality of streams of sensed data from sensors deployed to monitor aspects of an industrial machine associated with at least one moving part of the machine; at least one of the streams contains a plurality of frequencies of data. The method may include identifying a subset of data in at least one of the plurality of streams that corresponds to data representing at least one predefined frequency. The at least one predefined frequency is represented by a set of data collected from alternate sensors deployed to monitor aspects of the industrial machine associated with the at least one moving part of the machine. The method may further include processing the identified data with a data processing facility that processes the identified data with an algorithm configured to be applied to the set of data collected from alternate sensors. Lastly, the method may include storing the at least one of the streams of data, the identified subset of data, and a result of processing the identified data in an electronic data set.

Methods and systems described herein for industrial machine sensor data streaming, collection, processing, and storage may be configured to operate and integrate with existing data collection, processing, and storage systems and may include a method for applying data captured from sensors deployed to monitor aspects of an industrial machine associated with at least one moving part of the machine. The data is captured with predefined lines of resolution covering a predefined frequency range and is sent to a frequency matching facility that identifies a subset of data streamed from other sensors deployed to monitor aspects of the industrial machine associated with at least one moving part of the machine. The streamed data includes a plurality of lines of resolution and frequency ranges. The subset of data identified corresponds to the lines of resolution and predefined frequency range. This method may include storing the subset of data in an electronic data record in a format that corresponds to a format of the data captured with predefined lines of resolution and signaling to a data processing facility the presence of the stored subset of data. This method may, optionally, include processing the subset of data with at least one set of algorithms, models and pattern recognizers that corresponds to algorithms, models and pattern recognizers associated with processing the data captured with predefined lines of resolution covering a predefined frequency range.

Methods and systems described herein for industrial machine sensor data streaming, collection, processing, and storage may be configured to operate and integrate with existing data collection, processing and storage systems and may include a method for identifying a subset of streamed sensor data, the sensor data captured from sensors deployed to monitor aspects of an industrial machine associated with at least one moving part of the machine, the subset of streamed sensor data at predefined lines of resolution for a predefined frequency range, and establishing a first logical route for communicating electronically between a first computing facility performing the identifying and a second computing facility, wherein identified subset of the streamed sensor data is communicated exclusively over the established first logical route when communicating the subset of streamed sensor data from the first facility to the second facility. This method may further include establishing a second logical route for communicating electronically between the first computing facility and the second computing facility for at least one portion of the streamed sensor data that is not the identified subset. Additionally, this method may further include establishing a third logical route for communicating electronically between the first computing facility and the second computing facility for at least one portion of the streamed sensor data that includes the identified subset and at least one other portion of the data not represented by the identified subset.

Methods and systems described herein for industrial machine sensor data streaming, collection, processing, and storage may be configured to operate and integrate with existing data collection, processing and storage systems and may include a first data sensing and processing system that captures first data from a first set of sensors deployed to monitor aspects of an industrial machine associated with at least one moving part of the machine, the first data covering a set of lines of resolution and a frequency range. This system may include a second data sensing and processing system that captures and streams a second set of data from a second set of sensors deployed to monitor aspects of the industrial machine associated with at least one moving part of the machine, the second data covering a plurality of lines of resolution that includes the set of lines of resolution and a plurality of frequencies that includes the frequency range. The system may enable selecting a portion of the second data that corresponds to the set of lines of resolution and the frequency range of the first data, and processing the selected portion of the second data with the first data sensing and processing system.

Methods and systems described herein for industrial machine sensor data streaming, collection, processing, and storage may be configured to operate and integrate with existing data collection, processing and storage systems and may include a method for automatically processing a portion of a stream of sensed data. The sensed data is received from a first set of sensors deployed to monitor aspects of an industrial machine associated with at least one moving part of the machine. The sensed data is in response to an electronic data structure that facilitates extracting a subset of the stream of sensed data that corresponds to a set of sensed data received from a second set of sensors deployed to monitor the aspects of the industrial machine associated with the at least one moving part of the machine. The set of sensed data is constrained to a frequency range. The stream of sensed data includes a range of frequencies that exceeds the frequency range of the set of sensed data, the processing comprising executing an algorithm on a portion of the stream of sensed data that is constrained to the frequency range of the set of sensed data, the algorithm configured to process the set of sensed data.

Methods and systems described herein for industrial machine sensor data streaming, collection, processing, and storage may be configured to operate and integrate with existing data collection, processing and storage systems and may include a method for receiving first data from sensors deployed to monitor aspects of an industrial machine associated with at least one moving part of the machine. This method may further include detecting at least one of a frequency range and lines of resolution represented by the first data; receiving a stream of data from sensors deployed to monitor the aspects of the industrial machine associated with the at least one moving part of the machine. The stream of data includes: (1) a plurality of frequency ranges and a plurality of lines of resolution that exceeds the frequency range and the lines of resolution represented by the first data; (2) a set of data extracted from the stream of data that corresponds to at least one of the frequency range and the lines of resolution represented by the first data; and (3) the extracted set of data which is processed with a data processing algorithm that is configured to process data within the frequency range and within the lines of resolution of the first data.

In embodiments, a data collection system in an industrial environment may comprise a data collector communicatively coupled to a plurality of input channels; a data storage structured to store a plurality of collector routes and collected data that correspond to the plurality of input channels, wherein the plurality of collector routes each comprise a different data collection routine; a data acquisition circuit structured to interpret a plurality of detection values from the collected data, each of the plurality of detection values corresponding to at least one of the plurality of input channels; a data analysis circuit structured to analyze the collected data from the plurality of input channels; and a cognitive input selection facility for optimization of an input selection configuration for a collector route of the data collector, wherein the input selection configuration is based on a learning feedback from a learning feedback facility. In embodiments, the collection system may be an automatically adapting multi-sensor data collection system, such as where data collection routines are selected based on optimizing sensed parameters from the collected data over time. The learning feedback facility may be a remote learning feedback facility associated with a data collection marketplace, and the learning feedback is derived from user feedback metrics. The user feedback metrics may be based on market usage of sensed collected data over time. The cognitive input selection facility may derive input selection from a self-organizing data marketplace for industrial Internet-of-things data that comprises at least in part data collected by the data collection system. The self-organizing data marketplace may utilize a self-organizing data pool comprising data collected by the data collection system. The optimization of the input selection configuration may modify a hierarchical template for data collection. The cognitive input selection facility may anticipate state information from machine learning and pattern recognition to optimize the input selection configuration. The data collector may be one of a plurality of self-organized swarm of data collectors, wherein the plurality of self-organized swarm of data collectors organize among themselves to optimize data collection based at least in part on the optimized input selection configuration. The optimization of the input selection configuration may adjust a sensor capability for a sensor connected to one of the plurality of input channels. The optimization of the input selection configuration may adjust a use of at least one detection value from the plurality of detection values for use by the cognitive input selection facility for optimization of the input selection configuration. The optimization of the input selection configuration for the collector route may change a selected subset of the plurality of input channels for data collection from a first set of input channels to a second set of input channels to optimize data collection from a machine based on a determined life cycle of the machine, duty cycle of the machine, or operating stage of the machine. The learning feedback facility may be an expert system utilizing a neural network to identify optimizations of the input selection configuration. The cognitive input selection facility may store a distributed ledger for tracking of transactions associated with the collected data.

In embodiments, a computer-implemented method for data collection in an industrial environment may comprise a data collector communicatively coupled to a plurality of input channels; a data storage structured to store a plurality of collector routes and collected data that correspond to the plurality of input channels, wherein the plurality of collector routes each comprise a different data collection routine; a data acquisition circuit structured to interpret a plurality of detection values from the collected data, each of the plurality of detection values corresponding to at least one of the plurality of input channels; a data analysis circuit structured to analyze the collected data from the plurality of input channels; and a cognitive input selection facility for optimization of an input selection configuration for a collector route of the data collector, wherein the input selection configuration is based on a learning feedback from a learning feedback facility. In embodiments, the collection system may be an automatically adapting multi-sensor data collection system, such as where data collection routines are selected based on optimizing sensed parameters from the collected data over time. The learning feedback facility may be a remote learning feedback facility associated with a data collection marketplace, and the learning feedback is derived from user feedback metrics.

In embodiments, a monitoring apparatus for data collection in an industrial environment may comprise a data collector communicatively coupled to a plurality of input channels; a data storage structured to store a plurality of collector routes and collected data that correspond to the plurality of input channels, wherein the plurality of collector routes each comprise a different data collection routine; a data acquisition circuit structured to interpret a plurality of detection values from the collected data, each of the plurality of detection values corresponding to at least one of the plurality of input channels; a data analysis circuit structured to analyze the collected data from the plurality of input channels; and a cognitive input selection facility for optimization of an input selection configuration for a collector route of the data collector, wherein the input selection configuration is based on a learning feedback from a learning feedback facility. In embodiments, the collection system may be an automatically adapting multi-sensor data collection system, wherein data collection routines are selected based on optimizing sensed parameters from the collected data over time. The learning feedback facility may be a remote learning feedback facility associated with a data collection marketplace, and the learning feedback is derived from user feedback metrics.

Methods and systems are disclosed herein for continuous ultrasonic monitoring, including providing continuous ultrasonic monitoring of rotating elements and bearings of an energy production facility; for cloud-based systems including machine pattern recognition based on the fusion of remote, analog industrial sensors or machine pattern analysis of state information from multiple analog industrial sensors to provide anticipated state information for an industrial system; for on-device sensor fusion and data storage for industrial IoT devices, including on-device sensor fusion and data storage for an Industrial IoT device, where data from multiple sensors are multiplexed at the device for storage of a fused data stream; and for self-organizing systems including a self-organizing data marketplace for industrial IoT data, including a self-organizing data marketplace for industrial IoT data, where available data elements are organized in the marketplace for consumption by consumers based on training a self-organizing facility with a training set and feedback from measures of marketplace success, for self-organizing data pools, including self-organization of data pools based on utilization and/or yield metrics, including utilization and/or yield metrics that are tracked for a plurality of data pools, a self-organized swarm of industrial data collectors, including a self-organizing swarm of industrial data collectors that organize among themselves to optimize data collection based on the capabilities and conditions of the members of the swarm, a self-organizing collector, including a self-organizing, multi-sensor data collector that can optimize data collection, power and/or yield based on conditions in its environment, a self-organizing storage for a multi-sensor data collector, including self-organizing storage for a multi-sensor data collector for industrial sensor data, a self-organizing network coding for a multi-sensor data network, including self-organizing network coding for a data network that transports data from multiple sensors in an industrial data collection environment.

Methods and systems are disclosed herein for training artificial intelligence ("AI") models based on industry-specific feedback, including training an AI model based on industry-specific feedback that reflects a measure of utilization, yield, or impact, where the AI model operates on sensor data from an industrial environment; for an industrial IoT distributed ledger, including a distributed ledger supporting the tracking of transactions executed in an automated data marketplace for industrial IoT data; for a network-sensitive collector, including a network condition-sensitive, self-organizing, multi-sensor data collector that can optimize based on bandwidth, quality of service, pricing, and/or other network conditions; for a remotely organized universal data collector that can power up and down sensor interfaces based on need and/or conditions identified in an industrial data collection environment; and for a haptic or multi-sensory user interface, including a wearable haptic or multi-sensory user interface for an industrial sensor data collector, with vibration, heat, electrical, and/or sound outputs.

Methods and systems are disclosed herein for a presentation layer for augmented reality and virtual reality (AR/VR) industrial glasses, where heat map elements are presented based on patterns and/or parameters in collected data; and for condition-sensitive, self-organized tuning of AR/VR interfaces based on feedback metrics and/or training in industrial environments.

In embodiments, a system for data collection, processing, and utilization of signals from at least a first element in a first machine in an industrial environment includes a platform including a computing environment connected to a local data collection system having at least a first sensor signal and a second sensor signal obtained from at least the first machine in the industrial environment. The system includes a first sensor in the local data collection system configured to be connected to the first machine and a second sensor in the local data collection system. The system further includes a crosspoint switch in the local data collection system having multiple inputs and multiple outputs including a first input connected to the first sensor and a second input connected to the second sensor. Throughout the present disclosure, wherever a crosspoint switch, multiplexer (MUX) device, or other multiple-input multiple-output data collection or communication device is described, any multi-sensor acquisition device is also contemplated herein. In certain embodiments, a multi-sensor acquisition device includes one or more channels configured for, or compatible with, an analog sensor input. The multiple outputs include a first output and second output configured to be switchable between a condition in which the first output is configured to switch between delivery of the first sensor signal and the second sensor signal and a condition in which there is simultaneous delivery of the first sensor signal from the first output and the second sensor signal from the second output. Each of multiple inputs is configured to be individually assigned to any of the multiple outputs, or combined in any subsets of the inputs to the outputs. Unassigned outputs are configured to be switched off, for example by producing a high-impedance state.

In embodiments, the first sensor signal and the second sensor signal are continuous vibration data about the industrial environment. In embodiments, the second sensor in the local data collection system is configured to be connected to the first machine. In embodiments, the second sensor in the local data collection system is configured to be connected to a second machine in the industrial environment. In embodiments, the computing environment of the platform is configured to compare relative phases of the first and second sensor signals. In embodiments, the first sensor is a single-axis sensor and the second sensor is a three-axis sensor. In embodiments, at least one of the multiple inputs of the crosspoint switch includes internet protocol, front-end signal conditioning, for improved signal-to-noise ratio. In embodiments, the crosspoint switch includes a third input that is configured with a continuously monitored alarm having a pre-determined trigger condition when the third input is unassigned to or undetected at any of the multiple outputs.

In embodiments, the local data collection system includes multiple multiplexing units and multiple data acquisition units receiving multiple data streams from multiple machines in the industrial environment. In embodiments, the local data collection system includes distributed complex programmable hardware device ("CPLD") chips each dedicated to a data bus for logic control of the multiple multiplexing units and the multiple data acquisition units that receive the multiple data streams from the multiple machines in the industrial environment. In embodiments, the local data collection system is configured to provide high-amperage input capability using solid state relays. In embodiments, the local data collection system is configured to power-down at least one of an analog sensor channel and a component board.

In embodiments, the local data collection system includes a phase-lock loop bandpass tracking filter configured to obtain slow-speed revolutions per minute ("RPMs") and phase information. In embodiments, the local data collection system is configured to digitally derive phase using on-board timers relative to at least one trigger channel and at least one of the multiple inputs. In embodiments, the local data collection system includes a peak-detector configured to autoscale using a separate analog-to-digital converter for peak detection. In embodiments, the local data collection system is configured to route at least one trigger channel that is raw and buffered into at least one of the multiple inputs. In embodiments, the local data collection system includes at least one delta-sigma analog-to-digital converter that is configured to increase input oversampling rates to reduce sampling rate outputs and to minimize anti-aliasing filter requirements. In embodiments, the distributed CPLD chips each dedicated to the data bus for logic control of the multiple multiplexing units and the multiple data acquisition units includes as high-frequency crystal clock reference configured to be divided by at least one of the distributed CPLD chips for at least one delta-sigma analog-to-digital converter to achieve lower sampling rates without digital resampling.

In embodiments, the local data collection system is configured to obtain long blocks of data at a single relatively high-sampling rate as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units each having an onboard card set configured to store calibration information and maintenance history of a data acquisition unit in which the onboard card set is located. In embodiments, the local data collection system is configured to plan data acquisition routes based on hierarchical templates.

In embodiments, the local data collection system is configured to manage data collection bands. In embodiments, the data collection bands define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system is configured to create data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the local data collection system includes a graphical user interface ("GUI") system configured to manage the data collection bands. In embodiments, the GUI system includes an expert system diagnostic tool. In embodiments, the platform includes cloud-based, machine pattern analysis of state information from multiple sensors to provide anticipated state information for the industrial environment. In embodiments, the platform is configured to provide self-organization of data pools based on at least one of the utilization metrics and yield metrics. In embodiments, the platform includes a self-organized swarm of industrial data collectors. In embodiments, the local data collection system includes a wearable haptic user interface for an industrial sensor data collector with at least one of vibration, heat, electrical, and sound outputs.

In embodiments, multiple inputs of the crosspoint switch include a third input connected to the second sensor and a fourth input connected to the second sensor. The first sensor signal is from a single-axis sensor at an unchanging location associated with the first machine. In embodiments, the second sensor is a three-axis sensor. In embodiments, the local data collection system is configured to record gap-free digital waveform data simultaneously from at least the first input, the second input, the third input, and the fourth input. In embodiments, the platform is configured to determine a change in relative phase based on the simultaneously recorded gap-free digital waveform data. In embodiments, the second sensor is configured to be movable to a plurality of positions associated with the first machine while obtaining the simultaneously recorded gap-free digital waveform data. In embodiments, multiple outputs of the crosspoint switch include a third output and fourth output. The second, third, and fourth outputs are assigned together to a sequence of tri-axial sensors each located at different positions associated with the machine. In embodiments, the platform is configured to determine an operating deflection shape based on the change in relative phase and the simultaneously recorded gap-free digital waveform data.

In embodiments, the unchanging location is a position associated with the rotating shaft of the first machine. In embodiments, tri-axial sensors in the sequence of the tri-axial sensors are each located at different positions on the first machine but are each associated with different bearings in the machine. In embodiments, tri-axial sensors in the sequence of the tri-axial sensors are each located at similar positions associated with similar bearings but are each associated with different machines. In embodiments, the local data collection system is configured to obtain the simultaneously recorded gap-free digital waveform data from the first machine while the first machine and a second machine are both in operation. In embodiments, the local data collection system is configured to characterize a contribution from the first machine and the second machine in the simultaneously recorded gap-free digital waveform data from the first machine. In embodiments, the simultaneously recorded gap-free digital waveform data has a duration that is in excess of one minute.

In embodiments, a method of monitoring a machine having at least one shaft supported by a set of bearings includes monitoring a first data channel assigned to a single-axis sensor at an unchanging location associated with the machine. The method includes monitoring second, third, and fourth data channels each assigned to an axis of a three-axis sensor. The method includes recording gap-free digital waveform data simultaneously from all of the data channels while the machine is in operation and determining a change in relative phase based on the digital waveform data.

In embodiments, the tri-axial sensor is located at a plurality of positions associated with the machine while obtaining the digital waveform. In embodiments, the second, third, and fourth channels are assigned together to a sequence of tri-axial sensors each located at different positions associated with the machine. In embodiments, the data is received from all of the sensors simultaneously. In embodiments, the method includes determining an operating deflection shape based on the change in relative phase information and the waveform data. In embodiments, the unchanging location is a position associated with the shaft of the machine. In embodiments, the tri-axial sensors in the sequence of the tri-axial sensors are each located at different positions and are each associated with different bearings in the machine. In embodiments, the unchanging location is a position associated with the shaft of the machine. The tri-axial sensors in the sequence of the tri-axial sensors are each located at different positions and are each associated with different bearings that support the shaft in the machine.

In embodiments, the method includes monitoring the first data channel assigned to the single-axis sensor at an unchanging location located on a second machine. The method includes monitoring the second, the third, and the fourth data channels, each assigned to the axis of a three-axis sensor that is located at the position associated with the second machine. The method also includes recording gap-free digital waveform data simultaneously from all of the data channels from the second machine while both of the machines are in operation. In embodiments, the method includes characterizing the contribution from each of the machines in the gap-free digital waveform data simultaneously from the second machine.

In embodiments, a method for data collection, processing, and utilization of signals with a platform monitoring at least a first element in a first machine in an industrial environment includes obtaining, automatically with a computing environment, at least a first sensor signal and a second sensor signal with a local data collection system that monitors at least the first machine. The method includes connecting a first input of a crosspoint switch of the local data collection system to a first sensor and a second input of the crosspoint switch to a second sensor in the local data collection system. The method includes switching between a condition in which a first output of the crosspoint switch alternates between delivery of at least the first sensor signal and the second sensor signal and a condition in which there is simultaneous delivery of the first sensor signal from the first output and the second sensor signal from a second output of the crosspoint switch. The method also includes switching off unassigned outputs of the crosspoint switch into a high-impedance state.

In embodiments, the first sensor signal and the second sensor signal are continuous vibration data from the industrial environment. In embodiments, the second sensor in the local data collection system is connected to the first machine. In embodiments, the second sensor in the local data collection system is connected to a second machine in the industrial environment. In embodiments, the method includes comparing, automatically with the computing environment, relative phases of the first and second sensor signals. In embodiments, the first sensor is a single-axis sensor and the second sensor is a three-axis sensor. In embodiments, at least the first input of the crosspoint switch includes internet protocol front-end signal conditioning for improved signal-to-noise ratio.

In embodiments, the method includes continuously monitoring at least a third input of the crosspoint switch with an alarm having a pre-determined trigger condition when the third input is unassigned to any of multiple outputs on the crosspoint switch. In embodiments, the local data collection system includes multiple multiplexing units and multiple data acquisition units receiving multiple data streams from multiple machines in the industrial environment. In embodiments, the local data collection system includes distributed CPLD chips each dedicated to a data bus for logic control of the multiple multiplexing units and the multiple data acquisition units that receive the multiple data streams from the multiple machines in the industrial environment. In embodiments, the local data collection system provides high-amperage input capability using solid state relays.

In embodiments, the method includes powering down at least one of an analog sensor channel and a component board of the local data collection system. In embodiments, the local data collection system includes an external voltage reference for an A/D zero reference that is independent of the voltage of the first sensor and the second sensor. In embodiments, the local data collection system includes a phase-lock loop bandpass tracking filter that obtains slow-speed RPMs and phase information. In embodiments, the method includes digitally deriving phase using on-board timers relative to at least one trigger channel and at least one of multiple inputs on the crosspoint switch.

In embodiments, the method includes autoscaling with a peak-detector using a separate analog-to-digital converter for peak detection. In embodiments, the method includes routing at least one trigger channel that is raw and buffered into at least one of multiple inputs on the crosspoint switch. In embodiments, the method includes increasing input oversampling rates with at least one delta-sigma analog-to-digital converter to reduce sampling rate outputs and to minimize anti-aliasing filter requirements. In embodiments, the distributed CPLD chips are each dedicated to the data bus for logic control of the multiple multiplexing units and the multiple data acquisition units and each include a high-frequency crystal clock reference divided by at least one of the distributed CPLD chips for at least one delta-sigma analog-to-digital converter to achieve lower sampling rates without digital resampling. In embodiments, the method includes obtaining long blocks of data at a single relatively high-sampling rate with the local data collection system as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units and each data acquisition unit has an onboard card set that stores calibration information and maintenance history of a data acquisition unit in which the onboard card set is located.

In embodiments, the method includes planning data acquisition routes based on hierarchical templates associated with at least the first element in the first machine in the industrial environment. In embodiments, the local data collection system manages data collection bands that define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system creates data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the method includes controlling a GUI system of the local data collection system to manage the data collection bands. The GUI system includes an expert system diagnostic tool. In embodiments, the computing environment of the platform includes cloud-based, machine pattern analysis of state information from multiple sensors to provide anticipated state information for the industrial environment. In embodiments, the computing environment of the platform provides self-organization of data pools based on at least one of the utilization metrics and yield metrics. In embodiments, the computing environment of the platform includes a self-organized swarm of industrial data collectors. In embodiments, each of multiple inputs of the crosspoint switch is individually assignable to any of multiple outputs of the crosspoint switch.

Methods and systems described herein for industrial machine sensor data streaming, collection, processing, and storage may be configured to operate and integrate with existing data collection, processing and storage systems and may include a method for capturing a plurality of streams of sensed data from sensors deployed to monitor aspects of an industrial machine associated with at least one moving part of the machine; at least one of the streams contains a plurality of frequencies of data. The method may include identifying a subset of data in at least one of the plurality of streams that corresponds to data representing at least one predefined frequency. The at least one predefined frequency is represented by a set of data collected from alternate sensors deployed to monitor aspects of the industrial machine associated with the at least one moving part of the machine. The method may further include processing the identified data with a data processing facility that processes the identified data with an algorithm configured to be applied to the set of data collected from alternate sensors. Lastly, the method may include storing the at least one of the streams of data, the identified subset of data, and a result of processing the identified data in an electronic data set.

Methods and systems described herein for industrial machine sensor data streaming, collection, processing, and storage may be configured to operate and integrate with existing data collection, processing, and storage systems and may include a method for applying data captured from sensors deployed to monitor aspects of an industrial machine associated with at least one moving part of the machine. The data is captured with predefined lines of resolution covering a predefined frequency range and is sent to a frequency matching facility that identifies a subset of data streamed from other sensors deployed to monitor aspects of the industrial machine associated with at least one moving part of the machine. The streamed data includes a plurality of lines of resolution and frequency ranges. The subset of data identified corresponds to the lines of resolution and predefined frequency range. This method may include storing the subset of data in an electronic data record in a format that corresponds to a format of the data captured with predefined lines of resolution and signaling to a data processing facility the presence of the stored subset of data. This method may, optionally, include processing the subset of data with at least one set of algorithms, models and pattern recognizers that corresponds to algorithms, models and pattern recognizers associated with processing the data captured with predefined lines of resolution covering a predefined frequency range.

Methods and systems described herein for industrial machine sensor data streaming, collection, processing, and storage may be configured to operate and integrate with existing data collection, processing and storage systems and may include a method for identifying a subset of streamed sensor data, the sensor data captured from sensors deployed to monitor aspects of an industrial machine associated with at least one moving part of the machine, the subset of streamed sensor data at predefined lines of resolution for a predefined frequency range, and establishing a first logical route for communicating electronically between a first computing facility performing the identifying and a second computing facility, wherein identified subset of the streamed sensor data is communicated exclusively over the established first logical route when communicating the subset of streamed sensor data from the first facility to the second facility. This method may further include establishing a second logical route for communicating electronically between the first computing facility and the second computing facility for at least one portion of the streamed sensor data that is not the identified subset. Additionally, this method may further include establishing a third logical route for communicating electronically between the first computing facility and the second computing facility for at least one portion of the streamed sensor data that includes the identified subset and at least one other portion of the data not represented by the identified subset.

Methods and systems described herein for industrial machine sensor data streaming, collection, processing, and storage may be configured to operate and integrate with existing data collection, processing and storage systems and may include a first data sensing and processing system that captures first data from a first set of sensors deployed to monitor aspects of an industrial machine associated with at least one moving part of the machine, the first data covering a set of lines of resolution and a frequency range. This system may include a second data sensing and processing system that captures and streams a second set of data from a second set of sensors deployed to monitor aspects of the industrial machine associated with at least one moving part of the machine, the second data covering a plurality of lines of resolution that includes the set of lines of resolution and a plurality of frequencies that includes the frequency range. The system may enable selecting a portion of the second data that corresponds to the set of lines of resolution and the frequency range of the first data, and processing the selected portion of the second data with the first data sensing and processing system.

Methods and systems described herein for industrial machine sensor data streaming, collection, processing, and storage may be configured to operate and integrate with existing data collection, processing and storage systems and may include a method for automatically processing a portion of a stream of sensed data. The sensed data is received from a first set of sensors deployed to monitor aspects of an industrial machine associated with at least one moving part of the machine. The sensed data is in response to an electronic data structure that facilitates extracting a subset of the stream of sensed data that corresponds to a set of sensed data received from a second set of sensors deployed to monitor the aspects of the industrial machine associated with the at least one moving part of the machine. The set of sensed data is constrained to a frequency range. The stream of sensed data includes a range of frequencies that exceeds the frequency range of the set of sensed data, the processing comprising executing an algorithm on a portion of the stream of sensed data that is constrained to the frequency range of the set of sensed data, the algorithm configured to process the set of sensed data.

Methods and systems described herein for industrial machine sensor data streaming, collection, processing, and storage may be configured to operate and integrate with existing data collection, processing and storage systems and may include a method for receiving first data from sensors deployed to monitor aspects of an industrial machine associated with at least one moving part of the machine. This method may further include detecting at least one of a frequency range and lines of resolution represented by the first data; receiving a stream of data from sensors deployed to monitor the aspects of the industrial machine associated with the at least one moving part of the machine. The stream of data includes: (1) a plurality of frequency ranges and a plurality of lines of resolution that exceeds the frequency range and the lines of resolution represented by the first data; (2) a set of data extracted from the stream of data that corresponds to at least one of the frequency range and the lines of resolution represented by the first data; and (3) the extracted set of data which is processed with a data processing algorithm that is configured to process data within the frequency range and within the lines of resolution of the first data.

The present disclosure describes a system for data collection in an industrial production environment, the system according to one disclosed non-limiting embodiment of the present disclosure can include a data acquisition circuit structured to interpret a plurality of detection values, each of the plurality of detection values corresponding to input received from at least one of a plurality of input sensors, the at least one of the plurality of input sensors including a detection package, each of the plurality of input sensors operatively coupled to at least one of a plurality of components of an industrial production process, a data storage circuit structured to store a subset of the plurality of detection values and a plurality of data collection routes, wherein the plurality of data collection routes each include a different data collection routine, an expert system circuit structured to self-organize the plurality of detection values into at least one data collection band, and a data analysis circuit structured to analyze the subset of the plurality of detection values and determine a status parameter value.

In embodiments, the at least one data collection band includes at least one of the characteristics selected from the characteristics consisting of a specific frequency band, a group of spectral peaks, a true-peak level, a crest factor derived from a time waveform, a utilization level, a process yield and an overall waveform derived from a vibration envelope.

In embodiments, the expert system circuit is further structured to self-organize the plurality of detection values into the at least one data collection band utilizing at least one neural network selected from the networks consisting of learning vector quantization, an echo state network, a bi-directional recurrent network, a stochastic network, a genetic scale recurrent network, a committee of machines, an associative network, a neuro-fuzzy network, a compositional pattern-producing network, a hierarchical temporal memory network, and a holographic associate memory network.

In embodiments, the expert system circuit is further structured to self-organize the plurality of detection values into the at least one data collection band utilizing a learning vector quantization.

In embodiments, the system further includes an analysis response circuit structured to adjust the detection package in response to the status value.

In embodiments, the analysis response circuit is structured to adjust the detection package in response to the status parameter value by performing at least one operation selected from the operations consisting of adjusting a sensor range value, adjusting a sensor scaling value, adjusting a sampling frequency value, activating a sensor, deactivating a sensor, supporting multiple uses of a sensors input and switching between sensors having different values for a characteristic selected from the characteristics consisting of input range, sensitivity, type of sensor, location, reliability, duty cycle, and maintenance requirements.

In embodiments, the system further includes a data marketplace circuit structured to communicate at least a portion of the detection values to a data marketplace, wherein the data marketplace circuit performs at least one of self-organizing the data marketplace and automating the data marketplace.

In embodiments, the data storage circuit is further structured to store a distributed ledger, wherein the distributed ledger for stores at least one of at least a portion of transaction associated with the data marketplace, and at least a portion of the data values.

In embodiments, the system further includes a signal conditioning circuit structured to condition at least one of the plurality of detection values.

In embodiments, the signal conditioning circuit is further structured to condition the at least one of the plurality of detection values by performing at least one operation selected from the operations consisting of increasing an over-sampling rate, reducing a sampling rate, using a clock divider, reducing anti-aliasing operations, improving a signal to noise ratio, band pass filtering, and band pass tracking.

The present disclosure describes a method of a system for data collection in an industrial production environment, the method according to one disclosed non-limiting embodiment of the present disclosure can include, interpreting a plurality of detection values, each of the plurality of detection values corresponding to input received from a detection package, the detection package including at least one of a plurality of input sensors, each of the plurality of input sensors operatively coupled to at least one of a plurality of process components, storing the plurality of detection values and a plurality of data collection routes, wherein the plurality of data collection routes each includes a different data collection routine, self-organizing the plurality of detection values into at least one data collection band and analyzing the plurality of detection values and determine a status parameter value.

In embodiments, at least one data collection band includes at least one of the characteristics selected from the characteristics consisting of a specific frequency band, a group of spectral peaks, a true-peak level, a crest factor derived from a time waveform, a utilization level, a process yield, and an overall waveform derived from a vibration envelope.

In embodiments, self-organizing the plurality of detection values includes performing at least one technique selected from the techniques consisting of learning vector quantization, utilizing an echo state network, utilizing a bi-directional recurrent network, utilizing a stochastic network, utilizing a genetic scale recurrent network, utilizing a committee of machines, utilizing an associative network, utilizing a neuro-fuzzy network, utilizing a compositional pattern-producing network, utilizing a hierarchical temporal memory network, and a utilizing a holographic associate memory network.

In embodiments, the method further includes adjusting the detection package in response to the status parameter value.

In embodiments, adjusting the detection package includes performing at least one of the operations selected from the operations consisting of adjusting a sensor range, adjusting a sensor's scaling, adjusting a sampling frequency, activating a sensor, deactivating a sensor, supporting multiple uses of a sensors input, and switching between sensors having distinct values for at least one characteristic selected from the characteristics consisting of input ranges, sensitivities, locations, reliabilities, duty cycles, sensor types, and maintenance requirements.

In embodiments, the method further includes communicating at least a portion of the detection values to a data marketplace, wherein the data marketplace includes one of self-organizing and automated, and storing a distributed ledger for tracking at least one transaction of the data marketplace circuit.

The present disclosure describes aa apparatus for data collection in an industrial production environment, the apparatus according to one disclosed non-limiting embodiment of the present disclosure can include a data acquisition component configured to interpret a plurality of detection values, each of the plurality of detection values corresponding to input received from at least one of a plurality of input sensors, wherein the at least one of the plurality of input sensors includes a detection package, each of the plurality of input sensors operatively coupled to at least one of a plurality of components of an industrial production process, a data storage component configured to store at least one of a subset of the plurality of detection values, and a plurality of data collection routes, wherein the plurality of data collection routes each includes a different data collection routine, an expert system component configured to self-organize the plurality of detection values into at least one data collection band, and a data analysis component configured to analyze the subset of the plurality of detection values and determine a status parameter value.

In embodiments, the apparatus further includes a data marketplace component configured to make available at least a portion of the detection values in a data marketplace.

In embodiments, the data storage component is further configured to store a distributed ledger for tracking at least one transaction associated with the data marketplace.

In embodiments, the apparatus further includes a signal conditioning component configured to condition at least one of the plurality of detection values by increasing an over-sampling rate and reducing anti-aliasing operations.

Methods and systems are disclosed herein for continuous ultrasonic monitoring, including providing continuous ultrasonic monitoring of rotating elements and bearings of an energy production facility; for cloud-based systems including machine pattern recognition based on the fusion of remote, analog industrial sensors or machine pattern analysis of state information from multiple analog industrial sensors to provide anticipated state information for an industrial system; for on-device sensor fusion and data storage for industrial IoT devices, including on-device sensor fusion and data storage for an Industrial IoT device, where data from multiple sensors are multiplexed at the device for storage of a fused data stream; and for self-organizing systems including a self-organizing data marketplace for industrial IoT data, including a self-organizing data marketplace for industrial IoT data, where available data elements are organized in the marketplace for consumption by consumers based on training a self-organizing facility with a training set and feedback from measures of marketplace success, for self-organizing data pools, including self-organization of data pools based on utilization and/or yield metrics, including utilization and/or yield metrics that are tracked for a plurality of data pools, a self-organized swarm of industrial data collectors, including a self-organizing swarm of industrial data collectors that organize among themselves to optimize data collection based on the capabilities and conditions of the members of the swarm, a self-organizing collector, including a self-organizing, multi-sensor data collector that can optimize data collection, power and/or yield based on conditions in its environment, a self-organizing storage for a multi-sensor data collector, including self-organizing storage for a multi-sensor data collector for industrial sensor data, a self-organizing network coding for a multi-sensor data network, including self-organizing network coding for a data network that transports data from multiple sensors in an industrial data collection environment.

Methods and systems are disclosed herein for training artificial intelligence ("AI") models based on industry-specific feedback, including training an AI model based on industry-specific feedback that reflects a measure of utilization, yield, or impact, where the AI model operates on sensor data from an industrial environment; for an industrial IoT distributed ledger, including a distributed ledger supporting the tracking of transactions executed in an automated data marketplace for industrial IoT data; for a network-sensitive collector, including a network condition-sensitive, self-organizing, multi-sensor data collector that can optimize based on bandwidth, quality of service, pricing, and/or other network conditions; for a remotely organized universal data collector that can power up and down sensor interfaces based on need and/or conditions identified in an industrial data collection environment; and for a haptic or multi-sensory user interface, including a wearable haptic or multi-sensory user interface for an industrial sensor data collector, with vibration, heat, electrical, and/or sound outputs.

Methods and systems are disclosed herein for a presentation layer for augmented reality and virtual reality (AR/VR) industrial glasses, where heat map elements are presented based on patterns and/or parameters in collected data; and for condition-sensitive, self-organized tuning of AR/VR interfaces based on feedback metrics and/or training in industrial environments.

In embodiments, a system for data collection, processing, and utilization of signals from at least a first element in a first machine in an industrial environment includes a platform including a computing environment connected to a local data collection system having at least a first sensor signal and a second sensor signal obtained from at least the first machine in the industrial environment. The system includes a first sensor in the local data collection system configured to be connected to the first machine and a second sensor in the local data collection system. The system further includes a crosspoint switch in the local data collection system having multiple inputs and multiple outputs including a first input connected to the first sensor and a second input connected to the second sensor. Throughout the present disclosure, wherever a crosspoint switch, multiplexer (MUX) device, or other multiple-input multiple-output data collection or communication device is described, any multi-sensor acquisition device is also contemplated herein. In certain embodiments, a multi-sensor acquisition device includes one or more channels configured for, or compatible with, an analog sensor input. The multiple outputs include a first output and second output configured to be switchable between a condition in which the first output is configured to switch between delivery of the first sensor signal and the second sensor signal and a condition in which there is simultaneous delivery of the first sensor signal from the first output and the second sensor signal from the second output. Each of multiple inputs is configured to be individually assigned to any of the multiple outputs, or combined in any subsets of the inputs to the outputs. Unassigned outputs are configured to be switched off, for example by producing a high-impedance state.

In embodiments, the first sensor signal and the second sensor signal are continuous vibration data about the industrial environment. In embodiments, the second sensor in the local data collection system is configured to be connected to the first machine. In embodiments, the second sensor in the local data collection system is configured to be connected to a second machine in the industrial environment. In embodiments, the computing environment of the platform is configured to compare relative phases of the first and second sensor signals. In embodiments, the first sensor is a single-axis sensor and the second sensor is a three-axis sensor. In embodiments, at least one of the multiple inputs of the crosspoint switch includes internet protocol, front-end signal conditioning, for improved signal-to-noise ratio. In embodiments, the crosspoint switch includes a third input that is configured with a continuously monitored alarm having a pre-determined trigger condition when the third input is unassigned to or undetected at any of the multiple outputs.

In embodiments, the local data collection system includes multiple multiplexing units and multiple data acquisition units receiving multiple data streams from multiple machines in the industrial environment. In embodiments, the local data collection system includes distributed complex programmable hardware device ("CPLD") chips each dedicated to a data bus for logic control of the multiple multiplexing units and the multiple data acquisition units that receive the multiple data streams from the multiple machines in the industrial environment. In embodiments, the local data collection system is configured to provide high-amperage input capability using solid state relays. In embodiments, the local data collection system is configured to power-down at least one of an analog sensor channel and a component board.

In embodiments, the local data collection system includes a phase-lock loop bandpass tracking filter configured to obtain slow-speed revolutions per minute ("RPMs") and phase information. In embodiments, the local data collection system is configured to digitally derive phase using on-board timers relative to at least one trigger channel and at least one of the multiple inputs. In embodiments, the local data collection system includes a peak-detector configured to autoscale using a separate analog-to-digital converter for peak detection. In embodiments, the local data collection system is configured to route at least one trigger channel that is raw and buffered into at least one of the multiple inputs. In embodiments, the local data collection system includes at least one delta-sigma analog-to-digital converter that is configured to increase input oversampling rates to reduce sampling rate outputs and to minimize anti-aliasing filter requirements. In embodiments, the distributed CPLD chips each dedicated to the data bus for logic control of the multiple multiplexing units and the multiple data acquisition units includes as high-frequency crystal clock reference configured to be divided by at least one of the distributed CPLD chips for at least one delta-sigma analog-to-digital converter to achieve lower sampling rates without digital resampling.

In embodiments, the local data collection system is configured to obtain long blocks of data at a single relatively high-sampling rate as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units each having an onboard card set configured to store calibration information and maintenance history of a data acquisition unit in which the onboard card set is located. In embodiments, the local data collection system is configured to plan data acquisition routes based on hierarchical templates.

In embodiments, the local data collection system is configured to manage data collection bands. In embodiments, the data collection bands define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system is configured to create data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the local data collection system includes a graphical user interface ("GUI") system configured to manage the data collection bands. In embodiments, the GUI system includes an expert system diagnostic tool. In embodiments, the platform includes cloud-based, machine pattern analysis of state information from multiple sensors to provide anticipated state information for the industrial environment. In embodiments, the platform is configured to provide self-organization of data pools based on at least one of the utilization metrics and yield metrics. In embodiments, the platform includes a self-organized swarm of industrial data collectors. In embodiments, the local data collection system includes a wearable haptic user interface for an industrial sensor data collector with at least one of vibration, heat, electrical, and sound outputs.

In embodiments, multiple inputs of the cross-

point switch include a third input connected to the second sensor and a fourth input connected to the second sensor. The first sensor signal is from a single-axis sensor at an unchanging location associated with the first machine. In embodiments, the second sensor is a three-axis sensor. In embodiments, the local data collection system is configured to record gap-free digital waveform data simultaneously from at least the first input, the second input, the third input, and the fourth input. In embodiments, the platform is configured to determine a change in relative phase based on the simultaneously recorded gap-free digital waveform data. In embodiments, the second sensor is configured to be movable to a plurality of positions associated with the first machine while obtaining the simultaneously recorded gap-free digital waveform data. In embodiments, multiple outputs of the crosspoint switch include a third output and fourth output. The second, third, and fourth outputs are assigned together to a sequence of tri-axial sensors each located at different positions associated with the machine. In embodiments, the platform is configured to determine an operating deflection shape based on the change in relative phase and the simultaneously recorded gap-free digital waveform data.

In embodiments, the unchanging location is a position associated with the rotating shaft of the first machine. In embodiments, tri-axial sensors in the sequence of the tri-axial sensors are each located at different positions on the first machine but are each associated with different bearings in the machine. In embodiments, tri-axial sensors in the sequence of the tri-axial sensors are each located at similar positions associated with similar bearings but are each associated with different machines. In embodiments, the local data collection system is configured to obtain the simultaneously recorded gap-free digital waveform data from the first machine while the first machine and a second machine are both in operation. In embodiments, the local data collection system is configured to characterize a contribution from the first machine and the second machine in the simultaneously recorded gap-free digital waveform data from the first machine. In embodiments, the simultaneously recorded gap-free digital waveform data has a duration that is in excess of one minute.

In embodiments, a method of monitoring a machine having at least one shaft supported by a set of bearings includes monitoring a first data channel assigned to a single-axis sensor at an unchanging location associated with the machine. The method includes monitoring second, third, and fourth data channels each assigned to an axis of a three-axis sensor. The method includes recording gap-free digital waveform data simultaneously from all of the data channels while the machine is in operation and determining a change in relative phase based on the digital waveform data.

In embodiments, the tri-axial sensor is located at a plurality of positions associated with the machine while obtaining the digital waveform. In embodiments, the second, third, and fourth channels are assigned together to a sequence of tri-axial sensors each located at different positions associated with the machine. In embodiments, the data is received from all of the sensors simultaneously. In embodiments, the method includes determining an operating deflection shape based on the change in relative phase information and the waveform data. In embodiments, the unchanging location is a position associated with the shaft of the machine. In embodiments, the tri-axial sensors in the sequence of the tri-axial sensors are each located at different positions and are each associated with different bearings in the machine. In embodiments, the unchanging location is a position associated with the shaft of the machine. The tri-axial sensors in the sequence of the tri-axial sensors are each located at different positions and are each associated with different bearings that support the shaft in the machine.

In embodiments, the method includes monitoring the first data channel assigned to the single-axis sensor at an unchanging location located on a second machine. The method includes monitoring the second, the third, and the fourth data channels, each assigned to the axis of a three-axis sensor that is located at the position associated with the second machine. The method also includes recording gap-free digital waveform data simultaneously from all of the data channels from the second machine while both of the machines are in operation. In embodiments, the method includes characterizing the contribution from each of the machines in the gap-free digital waveform data simultaneously from the second machine.

In embodiments, a method for data collection, processing, and utilization of signals with a platform monitoring at least a first element in a first machine in an industrial environment includes obtaining, automatically with a computing environment, at least a first sensor signal and a second sensor signal with a local data collection system that monitors at least the first machine. The method includes connecting a first input of a crosspoint switch of the local data collection system to a first sensor and a second input of the crosspoint switch to a second sensor in the local data collection system. The method includes switching between a condition in which a first output of the crosspoint switch alternates between delivery of at least the first sensor signal and the second sensor signal and a condition in which there is simultaneous delivery of the first sensor signal from the first output and the second sensor signal from a second output of the crosspoint switch. The method also includes switching off unassigned outputs of the crosspoint switch into a high-impedance state.

In embodiments, the first sensor signal and the second sensor signal are continuous vibration data from the industrial environment. In embodiments, the second sensor in the local data collection system is connected to the first machine. In embodiments, the second sensor in the local data collection system is connected to a second machine in the industrial environment. In embodiments, the method includes comparing, automatically with the computing environment, relative phases of the first and second sensor signals. In embodiments, the first sensor is a single-axis sensor and the second sensor is a three-axis sensor. In embodiments, at least the first input of the crosspoint switch includes internet protocol front-end signal conditioning for improved signal-to-noise ratio.

In embodiments, the method includes continuously monitoring at least a third input of the crosspoint switch with an alarm having a pre-determined trigger condition when the third input is unassigned to any of multiple outputs on the crosspoint switch. In embodiments, the local data collection system includes multiple multiplexing units and multiple data acquisition units receiving multiple data streams from multiple machines in the industrial environment. In embodiments, the local data collection system includes distributed CPLD chips each dedicated to a data bus for logic control of the multiple multiplexing units and the multiple data acquisition units that receive the multiple data streams from the multiple machines in the industrial environment. In embodiments, the local data collection system provides high-amperage input capability using solid state relays.

In embodiments, the method includes powering down at least one of an analog sensor channel and a component board of the local data collection system. In embodiments, the local data collection system includes an external voltage reference for an A/D zero reference that is independent of the voltage of the first sensor and the second sensor. In embodiments, the local data collection system includes a phase-lock loop bandpass tracking filter that obtains slow-speed RPMs and phase information. In embodiments, the method includes digitally deriving phase using on-board timers relative to at least one trigger channel and at least one of multiple inputs on the crosspoint switch.

In embodiments, the method includes auto-scaling with a peak-detector using a separate analog-to-digital converter for peak detection. In embodiments, the method includes routing at least one trigger channel that is raw and buffered into at least one of multiple inputs on the crosspoint switch. In embodiments, the method includes increasing input oversampling rates with at least one delta-sigma analog-to-digital converter to reduce sampling rate outputs and to minimize anti-aliasing filter requirements. In embodiments, the distributed CPLD chips are each dedicated to the data bus for logic control of the multiple multiplexing units and the multiple data acquisition units and each include a high-frequency crystal clock reference divided by at least one of the distributed CPLD chips for at least one delta-sigma analog-to-digital converter to achieve lower sampling rates without digital resampling. In embodiments, the method includes obtaining long blocks of data at a single relatively high-sampling rate with the local data collection system as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units and each data acquisition unit has an onboard card set that stores calibration information and maintenance history of a data acquisition unit in which the onboard card set is located.

In embodiments, the method includes planning data acquisition routes based on hierarchical templates associated with at least the first element in the first machine in the industrial environment. In embodiments, the local data collection system manages data collection bands that define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system creates data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the method includes controlling a GUI system of the local data collection system to manage the data collection bands. The GUI system includes an expert system diagnostic tool. In embodiments, the computing environment of the platform includes cloud-based, machine pattern analysis of state information from multiple sensors to provide anticipated state information for the industrial environment. In embodiments, the computing environment of the platform provides self-organization of data pools based on at least one of the utilization metrics and yield metrics. In embodiments, the computing environment of the platform includes a self-organized swarm of industrial data collectors. In embodiments, each of multiple inputs of the crosspoint switch is individually assignable to any of multiple outputs of the crosspoint switch.

Methods and systems described herein for industrial machine sensor data streaming, collection, processing, and storage may be configured to operate and integrate with existing data collection, processing and storage systems and may include a method for capturing a plurality of streams of sensed data from sensors deployed to monitor aspects of an industrial machine associated with at least one moving part of the machine; at least one of the streams contains a plurality of frequencies of data. The method may include identifying a subset of data in at least one of the plurality of streams that corresponds to data representing at least one predefined frequency. The at least one predefined frequency is represented by a set of data collected from alternate sensors deployed to monitor aspects of the industrial machine associated with the at least one moving part of the machine. The method may further include processing the identified data with a data processing facility that processes the identified data with an algorithm configured to be applied to the set of data collected from alternate sensors. Lastly, the method may include storing the at least one of the streams of data, the identified subset of data, and a result of processing the identified data in an electronic data set.

Methods and systems described herein for industrial machine sensor data streaming, collection, processing, and storage may be configured to operate and integrate with existing data collection, processing, and storage systems and may include a method for applying data captured from sensors deployed to monitor aspects of an industrial machine associated with at least one moving part of the machine. The data is captured with predefined lines of resolution covering a predefined frequency range and is sent to a frequency matching facility that identifies a subset of data streamed from other sensors deployed to monitor aspects of the industrial machine associated with at least one moving part of the machine. The streamed data includes a plurality of lines of resolution and frequency ranges. The subset of data identified corresponds to the lines of resolution and predefined frequency range. This method may include storing the subset of data in an electronic data record in a format that corresponds to a format of the data captured with predefined lines of resolution and signaling to a data processing facility the presence of the stored subset of data. This method may, optionally, include processing the subset of data with at least one set of algorithms, models and pattern recognizers that corresponds to algorithms, models and pattern recognizers associated with processing the data captured with predefined lines of resolution covering a predefined frequency range.

Methods and systems described herein for industrial machine sensor data streaming, collection, processing, and storage may be configured to operate and integrate with existing data collection, processing and storage systems and may include a method for identifying a subset of streamed sensor data, the sensor data captured from sensors deployed to monitor aspects of an industrial machine associated with at least one moving part of the machine, the subset of streamed sensor data at predefined lines of resolution for a predefined frequency range, and establishing a first logical route for communicating electronically between a first computing facility performing the identifying and a second computing facility, wherein identified subset of the streamed sensor data is communicated exclusively over the established first logical route when communicating the subset of streamed sensor data from the first facility to the second facility. This method may further include establishing a second logical route for communicating electronically between the first computing facility and the second computing facility for at least one portion of the streamed sensor data that is not the identified subset. Additionally, this method may further include establishing a third logical route for communicating electronically between the first computing facility and the second computing facility for at least one portion of the streamed sensor data that includes the identified subset and at least one other portion of the data not represented by the identified subset.

Methods and systems described herein for industrial machine sensor data streaming, collection, processing, and storage may be configured to operate and integrate with existing data collection, processing and storage systems and may include a first data sensing and processing system that captures first data from a first set of sensors deployed to monitor aspects of an industrial machine associated with at least one moving part of the machine, the first data covering a set of lines of resolution and a frequency range. This system may include a second data sensing and processing system that captures and streams a second set of data from a second set of sensors deployed to monitor aspects of the industrial machine associated with at least one moving part of the machine, the second data covering a plurality of lines of resolution that includes the set of lines of resolution and a plurality of frequencies that includes the frequency range. The system may enable selecting a portion of the second data that corresponds to the set of lines of resolution and the frequency range of the first data, and processing the selected portion of the second data with the first data sensing and processing system.

Methods and systems described herein for industrial machine sensor data streaming, collection, processing, and storage may be configured to operate and integrate with existing data collection, processing and storage systems and may include a method for automatically processing a portion of a stream of sensed data. The sensed data is received from a first set of sensors deployed to monitor aspects of an industrial machine associated with at least one moving part of the machine. The sensed data is in response to an electronic data structure that facilitates extracting a subset of the stream of sensed data that corresponds to a set of sensed data received from a second set of sensors deployed to monitor the aspects of the industrial machine associated with the at least one moving part of the machine. The set of sensed data is constrained to a frequency range. The stream of sensed data includes a range of frequencies that exceeds the frequency range of the set of sensed data, the processing comprising executing an algorithm on a portion of the stream of sensed data that is constrained to the frequency range of the set of sensed data, the algorithm configured to process the set of sensed data.

Methods and systems described herein for industrial machine sensor data streaming, collection, processing, and storage may be configured to operate and integrate with existing data collection, processing and storage systems and may include a method for receiving first data from sensors deployed to monitor aspects of an industrial machine associated with at least one moving part of the machine. This method may further include detecting at least one of a frequency range and lines of resolution represented by the first data; receiving a stream of data from sensors deployed to monitor the aspects of the industrial machine associated with the at least one moving part of the machine. The stream of data includes: (1) a plurality of frequency ranges and a plurality of lines of resolution that exceeds the frequency range and the lines of resolution represented by the first data; (2) a set of data extracted from the stream of data that corresponds to at least one of the frequency range and the lines of resolution represented by the first data; and (3) the extracted set of data which is processed with a data processing algorithm that is configured to process data within the frequency range and within the lines of resolution of the first data.

The present disclosure describes a system for data collection in an industrial environment, the system according to one disclosed non-limiting embodiment of the present disclosure can include a data acquisition circuit structured to interpret a plurality of detection values, each of the plurality of detection values corresponding to input received from at least one of a plurality of input sensors, wherein the at least one of the plurality of input sensors includes a detection package, each of the plurality of input sensors operatively coupled to at least one of a plurality of components of an industrial production process, a data marketplace circuit structured to communicate at least one of the plurality of detection values to a data marketplace, and to obtain at least one external detection value including a detection value from an offset industrial production process, a data analysis circuit structured to determine a state value including at least one of a sensor state, a process state, and a component state, wherein the data analysis circuit comprises a pattern recognition circuit structured to analyze a subset of the plurality of detection values and the at least one external detection value using at least one of a neural net or an expert system, an optimization circuit configured to provide a recommendation to adjust a parameter of the industrial production process in response to the state value and an analysis response circuit structured to perform an action in response to the recommendation.

In embodiments, the recommendation includes an adjustment for at least one of the detection package, one of the plurality input sensors, an equipment package, a set of process parameters, a data collection route, a process setting for the industrial production process and a process component for the industrial production process.

In embodiments, the system further includes a data storage circuit structured to store a subset of the detection values.

In embodiments, the data storage circuit is further structured to store a plurality of hierarchical templates, wherein each of the plurality of hierarchical templates comprises at least one data collection route corresponding to one of the plurality of input sensors.

In embodiments, the data storage circuit is further structured to store a distributed ledger, wherein the distributed ledger stores at least one of a transaction associated with the data marketplace, and a subset of the detection values.

In embodiments, the analysis response circuit is further structured to perform the action by adjusting the detection package.

In embodiments, the analysis response circuit is further structured to adjust the detection package by adjusting at least one parameter selected from the parameters consisting of a sensor range, a sensor scaling value, a sensor sampling frequency, a data storage sampling frequency, and a utilized sensor value, the utilized sensor value indicating which sensor from a plurality of available sensors is utilized in the detection package, and wherein the plurality of available sensors have at least one distinct sensing parameter selected from the sensing parameters consisting of input ranges, sensitivity values, locations, reliability values, duty cycle values, resolution values, and maintenance requirements.

In embodiments, the system further includes a signal processing circuit structured to condition an incoming signal comprising at least one of the detection values.

In embodiments, the data storage circuit further includes a data storage profile circuit structured to determine a data storage profile, the data storage profile including a data storage plan for at least one of the plurality of detection values.

In embodiments, the data storage profile comprises at least one element selected from the elements consisting of a storage location for the at least one of the plurality of detection values, a time data storage trajectory comprising a plurality of time values corresponding to a plurality of storage locations over which the corresponding at least one of the plurality of detection values is to be stored, a time domain distribution over which the at least one of the plurality of detection values is to be stored and location data storage trajectory comprising a plurality of storage locations over which the at least one of the plurality of detection values is to be stored.

In embodiments, the system further includes an analysis response circuit further structured to provide at least one haptic stimulation value in response to the state value and a wearable haptic stimulator responsive to the at least one haptic stimulation value to produce a stimulation.

In embodiments, the stimulation comprises at least one of tactile, vibration, heat, sound, force, odor, and motion.

In embodiments, the system further includes a plurality of mobile data collector units, an expert system circuit structured to self-organize one or more detection packages and an associated subset of the plurality of mobile data collector units using a swarm optimization algorithm and a policy automation engine circuit structured to access a plurality of policies, the plurality of policies comprising rules and protocols related to at least one of interconnectivity between the plurality of mobile data collector units, interconnectivity between at least one of the plurality of mobile data collector units and the data acquisition circuit, an identification of which of the plurality of detection values are to be communicated by the data marketplace circuit and a determination of which external detection values are to be obtained by the data marketplace circuit.

The present disclosure describes a method for data collection in an industrial environment, the method according to one disclosed non-limiting embodiment of the present disclosure can include interpreting a plurality of detection values, each of the plurality of detection values corresponding to input received from at least one of a plurality of input sensors, wherein the at least one of the plurality of input sensors comprise a detection package, each of the plurality of input sensors operatively coupled to at least one of a plurality of components of an industrial production process, accessing a data marketplace and obtaining at least one external detection value comprising a detection value from an offset industrial production process, determining a state value comprising at least one of a sensor state, a process state, and a component state, analyzing a subset of the plurality of detection values and the at least one external detection value using at least one of a neural net or an expert system and providing a recommendation in response to the state value, and performing an action in response to the recommendation.

In embodiments, performing the action comprises adjusting at least one of the detection package, one of the plurality of input sensors, an equipment package, a process parameter, a data collection route, a process setting for the industrial production process and a process component for the industrial production process.

In embodiments, the method further includes storing a distributed ledger, the distributed ledger storing at least one of transactions associated with the data marketplace, or at least one of the detection values.

In embodiments, performing the action includes adjusting a data collection route for one of the plurality of detection values by switching from a first hierarchical template comprising a first data collection route to a second hierarchical template comprising a second data collection route.

In embodiments, performing the action comprises adjusting the detection package.

In embodiments, the method further includes determining a data storage profile, the data storage profile comprising a data storage plan for at least one of the plurality of detection values.

The present disclosure describes an apparatus for data collection in an industrial environment, the apparatus according to one disclosed non-limiting embodiment of the present disclosure can include a data acquisition component configured to interpret a plurality of detection values, each of the plurality of detection values corresponding to input received from at least one of a plurality of input sensors, wherein the plurality of input sensors constitute a detection package, each of the plurality of input sensors operatively coupled to at least one of a plurality of components of an industrial production process, a data marketplace component configured to communicate at least one of the plurality of detection values to a data marketplace and to obtain at least one external detection value including a detection value from an offset industrial production process, a data analysis component configured to determine a state value comprising at least one of a sensor state, a process state, and a component state, wherein the data analysis component includes a pattern recognition component configured to analyze a subset of the plurality of detection values and the at least one external detection value using at least one of a neural net or an expert system, an optimization component configured to provide a recommendation in response to the state value, and an analysis response component configured to perform an action in response to the recommendation.

In embodiments, the data storage component further includes a data storage profile component configured to determine a data storage profile, the data storage profile inluding a data storage plan for at least one of the plurality of detection values, wherein the data storage profile includes an element selected from the elements consisting of a storage location for the at least one of the plurality of detection values, a time data storage trajectory comprising a plurality of time values corresponding to a plurality of storage locations over which the corresponding at least one of the plurality of detection values is to be stored, a time domain distribution over which the at least one of the plurality of detection values is to be stored and a location data storage trajectory including a plurality of storage locations over which the at least one of the plurality of detection values is to be stored.

In embodiments, the apparatus further includes a plurality of mobile data collector units, an expert system component configured to self-organize one or more detection packages and an associated subset of the plurality of mobile data collector units using a swarm optimization algorithm, and a policy automation engine component configured to access at least one of a plurality of policies.

In embodiments, each of the plurality of policies includes rules and protocols related to at least one of interconnectivity between the plurality of mobile data collector units, interconnectivity between at least one of the plurality of mobile data collector units and the data acquisition circuit, an identification of which detection values are communicated by the data marketplace circuit and a determination of which external detection values are obtained by the data marketplace circuit.

Methods and systems are disclosed herein for continuous ultrasonic monitoring, including providing continuous ultrasonic monitoring of rotating elements and bearings of an energy production facility; for cloud-based systems including machine pattern recognition based on the fusion of remote, analog industrial sensors or machine pattern analysis of state information from multiple analog industrial sensors to provide anticipated state information for an industrial system; for on-device sensor fusion and data storage for industrial IoT devices, including on-device sensor fusion and data storage for an Industrial IoT device, where data from multiple sensors are multiplexed at the device for storage of a fused data stream; and for self-organizing systems including a self-organizing data marketplace for industrial IoT data, including a self-organizing data marketplace for industrial IoT data, where available data elements are organized in the marketplace for consumption by consumers based on training a self-organizing facility with a training set and feedback from measures of marketplace success, for self-organizing data pools, including self-organization of data pools based on utilization and/or yield metrics, including utilization and/or yield metrics that are tracked for a plurality of data pools, a self-organized swarm of industrial data collectors, including a self-organizing swarm of industrial data collectors that organize among themselves to optimize data collection based on the capabilities and conditions of the members of the swarm, a self-organizing collector, including a self-organizing, multi-sensor data collector that can optimize data collection, power and/or yield based on conditions in its environment, a self-organizing storage for a multi-sensor data collector, including self-organizing storage for a multi-sensor data collector for industrial sensor data, a self-organizing network coding for a multi-sensor data network, including self-organizing network coding for a data network that transports data from multiple sensors in an industrial data collection environment.

Methods and systems are disclosed herein for training artificial intelligence ("AI") models based on industry-specific feedback, including training an AI model based on industry-specific feedback that reflects a measure of utilization, yield, or impact, where the AI model operates on sensor data from an industrial environment; for an industrial IoT distributed ledger, including a distributed ledger supporting the tracking of transactions executed in an automated data marketplace for industrial IoT data; for a network-sensitive collector, including a network condition-sensitive, self-organizing, multi-sensor data collector that can optimize based on bandwidth, quality of service, pricing, and/or other network conditions; for a remotely organized universal data collector that can power up and down sensor interfaces based on need and/or conditions identified in an industrial data collection environment; and for a haptic or multi-sensory user interface, including a wearable haptic or multi-sensory user interface for an industrial sensor data collector, with vibration, heat, electrical, and/or sound outputs.

Methods and systems are disclosed herein for a presentation layer for augmented reality and virtual reality (AR/VR) industrial glasses, where heat map elements are presented based on patterns and/or parameters in collected data; and for condition-sensitive, self-organized tuning of AR/VR interfaces based on feedback metrics and/or training in industrial environments.

In embodiments, a system for data collection, processing, and utilization of signals from at least a first element in a first machine in an industrial environment includes a platform including a computing environment connected to a local data collection system having at least a first sensor signal and a second sensor signal obtained from at least the first machine in the industrial environment. The system includes a first sensor in the local data collection system configured to be connected to the first machine and a second sensor in the local data collection system. The system further includes a cross-point switch in the local data collection system having multiple inputs and multiple outputs including a first input connected to the first sensor and a second input connected to the second sensor. Throughout the present disclosure, wherever a crosspoint switch, multiplexer (MUX) device, or other multiple-input multiple-output data collection or communication device is described, any multi-sensor acquisition device is also contemplated herein. In certain embodiments, a multi-sensor acquisition device includes one or more channels configured for, or compatible with, an analog sensor input. The multiple outputs include a first output and second output configured to be switchable between a condition in which the first output is configured to switch between delivery of the first sensor signal and the second sensor signal and a condition in which there is simultaneous delivery of the first sensor signal from the first output and the second sensor signal from the second output. Each of multiple inputs is configured to be individually assigned to any of the multiple outputs, or combined in any subsets of the inputs to the outputs. Unassigned outputs are configured to be switched off, for example by producing a high-impedance state.

In embodiments, the first sensor signal and the second sensor signal are continuous vibration data about the industrial environment. In embodiments, the second sensor in the local data collection system is configured to be connected to the first machine. In embodiments, the second sensor in the local data collection system is configured to be connected to a second machine in the industrial environment. In embodiments, the computing environment of the platform is configured to compare relative phases of the first and second sensor signals. In embodiments, the first sensor is a single-axis sensor and the second sensor is a three-axis sensor. In embodiments, at least one of the multiple inputs of the crosspoint switch includes internet protocol, front-end signal conditioning, for improved signal-to-noise ratio. In embodiments, the crosspoint switch includes a third input that is configured with a continuously monitored alarm having a pre-determined trigger condition when the third input is unassigned to or undetected at any of the multiple outputs.

In embodiments, the local data collection system includes multiple multiplexing units and multiple data acquisition units receiving multiple data streams from multiple machines in the industrial environment. In embodiments, the local data collection system includes distributed complex programmable hardware device ("CPLD") chips each dedicated to a data bus for logic control of the multiple multiplexing units and the multiple data acquisition units that receive the multiple data streams from the multiple machines in the industrial environment. In embodiments, the local data collection system is configured to provide high-amperage input capability using solid state relays. In embodiments, the local data collection system is configured to power-down at least one of an analog sensor channel and a component board.

In embodiments, the local data collection system includes a phase-lock loop bandpass tracking filter configured to obtain slow-speed revolutions per minute ("RPMs") and phase information. In embodiments, the local data collection system is configured to digitally derive phase using on-board timers relative to at least one trigger channel and at least one of the multiple inputs. In embodiments, the local data collection system includes a peak-detector configured to autoscale using a separate analog-to-digital converter for peak detection. In embodiments, the local data collection system is configured to route at least one trigger channel that is raw and buffered into at least one of the multiple inputs. In embodiments, the local data collection system includes at least one delta-sigma analog-to-digital converter that is configured to increase input oversampling rates to reduce sampling rate outputs and to minimize anti-aliasing filter requirements. In embodiments, the distributed CPLD chips each dedicated to the data bus for logic control of the multiple multiplexing units and the multiple data acquisition units includes as high-frequency crystal clock reference configured to be divided by at least one of the distributed CPLD chips for at least one delta-sigma analog-to-digital converter to achieve lower sampling rates without digital resampling.

In embodiments, the local data collection system is configured to obtain long blocks of data at a single relatively high-sampling rate as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units each having an onboard card set configured to store calibration information and maintenance history of a data acquisition unit in which the onboard card set is located. In embodiments, the local data collection system is configured to plan data acquisition routes based on hierarchical templates.

In embodiments, the local data collection system is configured to manage data collection bands. In embodiments, the data collection bands define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system is configured to create data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the local data collection system includes a graphical user interface ("GUI") system configured to manage the data collection bands. In embodiments, the GUI system includes an expert system diagnostic tool. In embodiments, the platform includes cloud-based, machine pattern analysis of state information from multiple sensors to provide anticipated state information for the industrial environment. In embodiments, the platform is configured to provide self-organization of data pools based on at least one of the utilization metrics and yield metrics. In embodiments, the platform includes a self-organized swarm of industrial data collectors. In embodiments, the local data collection system includes a wearable haptic user interface for an industrial sensor data collector with at least one of vibration, heat, electrical, and sound outputs.

In embodiments, multiple inputs of the crosspoint switch include a third input connected to the second sensor and a fourth input connected to the second sensor. The first sensor signal is from a single-axis sensor at an unchanging location associated with the first machine. In embodiments, the second sensor is a three-axis sensor. In embodiments, the local data collection system is configured to record gap-free digital waveform data simultaneously from at least the first input, the second input, the third input, and the fourth input. In embodiments, the platform is configured to determine a change in relative phase based on the simultaneously recorded gap-free digital waveform data. In embodiments, the second sensor is configured to be movable to a plurality of positions associated with the first machine while obtaining the simultaneously recorded gap-free digital waveform data. In embodiments, multiple outputs of the crosspoint switch include a third output and fourth output. The second, third, and fourth outputs are assigned together to a sequence of tri-axial sensors each located at different positions associated with the machine. In embodiments, the platform is configured to determine an operating deflection shape based on the change in relative phase and the simultaneously recorded gap-free digital waveform data.

In embodiments, the unchanging location is a position associated with the rotating shaft of the first machine. In embodiments, tri-axial sensors in the sequence of the tri-axial sensors are each located at different positions on the first machine but are each associated with different bearings in the machine. In embodiments, tri-axial sensors in the sequence of the tri-axial sensors are each located at similar positions associated with similar bearings but are each associated with different machines. In embodiments, the local data collection system is configured to obtain the simultaneously recorded gap-free digital waveform data from the first machine while the first machine and a second machine are both in operation. In embodiments, the local data collection system is configured to characterize a contribution from the first machine and the second machine in the simultaneously recorded gap-free digital waveform data from the first machine. In embodiments, the simultaneously recorded gap-free digital waveform data has a duration that is in excess of one minute.

In embodiments, a method of monitoring a machine having at least one shaft supported by a set of bearings includes monitoring a first data channel assigned to a single-axis sensor at an unchanging location associated with the machine. The method includes monitoring second, third, and fourth data channels each assigned to an axis of a three-axis sensor. The method includes recording gap-free digital waveform data simultaneously from all of the data channels while the machine is in operation and determining a change in relative phase based on the digital waveform data.

In embodiments, the tri-axial sensor is located at a plurality of positions associated with the machine while obtaining the digital waveform. In embodiments, the second, third, and fourth channels are assigned together to a sequence of tri-axial sensors each located at different positions associated with the machine. In embodiments, the data is received from all of the sensors simultaneously. In embodiments, the method includes determining an operating deflection shape based on the change in relative phase information and the waveform data. In embodiments, the unchanging location is a position associated with the shaft of the machine. In embodiments, the tri-axial sensors in the sequence of the tri-axial sensors are each located at different positions and are each associated with different bearings in the machine. In embodiments, the unchanging location is a position associated with the shaft of the machine. The tri-axial sensors in the sequence of the tri-axial sensors are each located at different positions and are each associated with different bearings that support the shaft in the machine.

In embodiments, the method includes monitoring the first data channel assigned to the single-axis sensor at an unchanging location located on a second machine. The method includes monitoring the second, the third, and the fourth data channels, each assigned to the axis of a three-axis sensor that is located at the position associated with the second machine. The method also includes recording gap-free digital waveform data simultaneously from all of the data channels from the second machine while both of the machines are in operation. In embodiments, the method includes characterizing the contribution from each of the machines in the gap-free digital waveform data simultaneously from the second machine.

In embodiments, a method for data collection, processing, and utilization of signals with a platform monitoring at least a first element in a first machine in an industrial environment includes obtaining, automatically with a computing environment, at least a first sensor signal and a second sensor signal with a local data collection system that monitors at least the first machine. The method includes connecting a first input of a crosspoint switch of the local data collection system to a first sensor and a second input of the crosspoint switch to a second sensor in the local data collection system. The method includes switching between a condition in which a first output of the crosspoint switch alternates between delivery of at least the first sensor signal and the second sensor signal and a condition in which there is simultaneous delivery of the first sensor signal from the first output and the second sensor signal from a second output of the crosspoint switch. The method also includes switching off unassigned outputs of the crosspoint switch into a high-impedance state.

In embodiments, the first sensor signal and the second sensor signal are continuous vibration data from the industrial environment. In embodiments, the second sensor in the local data collection system is connected to the first machine. In embodiments, the second sensor in the local data collection system is connected to a second machine in the industrial environment. In embodiments, the method includes comparing, automatically with the computing environment, relative phases of the first and second sensor signals. In embodiments, the first sensor is a single-axis sensor and the second sensor is a three-axis sensor. In embodiments, at least the first input of the crosspoint switch includes internet protocol front-end signal conditioning for improved signal-to-noise ratio.

In embodiments, the method includes continuously monitoring at least a third input of the crosspoint switch with an alarm having a pre-determined trigger condition when the third input is unassigned to any of multiple outputs on the crosspoint switch. In embodiments, the local data collection system includes multiple multiplexing units and multiple data acquisition units receiving multiple data streams from multiple machines in the industrial environment. In embodiments, the local data collection system includes distributed CPLD chips each dedicated to a data bus for logic control of the multiple multiplexing units and the multiple data acquisition units that receive the multiple data streams from the multiple machines in the industrial environment. In embodiments, the local data collection system provides high-amperage input capability using solid state relays.

In embodiments, the method includes powering down at least one of an analog sensor channel and a component board of the local data collection system. In embodiments, the local data collection system includes an external voltage reference for an A/D zero reference that is independent of the voltage of the first sensor and the second sensor. In embodiments, the local data collection system includes a phase-lock loop bandpass tracking filter that obtains slow-speed RPMs and phase information. In embodiments, the method includes digitally deriving phase using on-board timers relative to at least one trigger channel and at least one of multiple inputs on the crosspoint switch.

In embodiments, the method includes auto-scaling with a peak-detector using a separate analog-to-digital converter for peak detection. In embodiments, the method includes routing at least one trigger channel that is raw and buffered into at least one of multiple inputs on the crosspoint switch. In embodiments, the method includes increasing input oversampling rates with at least one delta-sigma analog-to-digital converter to reduce sampling rate outputs and to minimize anti-aliasing filter requirements. In embodiments, the distributed CPLD chips are each dedicated to the data bus for logic control of the multiple multiplexing units and the multiple data acquisition units and each include a high-frequency crystal clock reference divided by at least one of the distributed CPLD chips for at least one delta-sigma analog-to-digital converter to achieve lower sampling rates without digital resampling. In embodiments, the method includes obtaining long blocks of data at a single relatively high-sampling rate with the local data collection system as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units and each data acquisition unit has an onboard card set that stores calibration information and maintenance history of a data acquisition unit in which the onboard card set is located.

In embodiments, the method includes planning data acquisition routes based on hierarchical templates associated with at least the first element in the first machine in the industrial environment. In embodiments, the local data collection system manages data collection bands that define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system creates data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the method includes controlling a GUI system of the local data collection system to manage the data collection bands. The GUI system includes an expert system diagnostic tool. In embodiments, the computing environment of the platform includes cloud-based, machine pattern analysis of state information from multiple sensors to provide anticipated state information for the industrial environment. In embodiments, the computing environment of the platform provides self-organization of data pools based on at least one of the utilization metrics and yield metrics. In embodiments, the computing environment of the platform includes a self-organized swarm of industrial data collectors. In embodiments, each of multiple inputs of the crosspoint switch is individually assignable to any of multiple outputs of the crosspoint switch.

Methods and systems described herein for industrial machine sensor data streaming, collection, processing, and storage may be configured to operate and integrate with existing data collection, processing and storage systems and may include a method for capturing a plurality of streams of sensed data from sensors deployed to monitor aspects of an industrial machine associated with at least one moving part of the machine; at least one of the streams contains a plurality of frequencies of data. The method may include identifying a subset of data in at least one of the plurality of streams that corresponds to data representing at least one predefined frequency. The at least one predefined frequency is represented by a set of data collected from alternate sensors deployed to monitor aspects of the industrial machine associated with the at least one moving part of the machine. The method may further include processing the identified data with a data processing facility that processes the identified data with an algorithm configured to be applied to the set of data collected from alternate sensors. Lastly, the method may include storing the at least one of the streams of data, the identified subset of data, and a result of processing the identified data in an electronic data set.

Methods and systems described herein for industrial machine sensor data streaming, collection, processing, and storage may be configured to operate and integrate with existing data collection, processing, and storage systems and may include a method for applying data captured from sensors deployed to monitor aspects of an industrial machine associated with at least one moving part of the machine. The data is captured with predefined lines of resolution covering a predefined frequency range and is sent to a frequency matching facility that identifies a subset of data streamed from other sensors deployed to monitor aspects of the industrial machine associated with at least one moving part of the machine. The streamed data includes a plurality of lines of resolution and frequency ranges. The subset of data identified corresponds to the lines of resolution and predefined frequency range. This method may include storing the subset of data in an electronic data record in a format that corresponds to a format of the data captured with predefined lines of resolution and signaling to a data processing facility the presence of the stored subset of data. This method may, optionally, include processing the subset of data with at least one set of algorithms, models and pattern recognizers that corresponds to algorithms, models and pattern recognizers associated with processing the data captured with predefined lines of resolution covering a predefined frequency range.

Methods and systems described herein for industrial machine sensor data streaming, collection, processing, and storage may be configured to operate and integrate with existing data collection, processing and storage systems and may include a method for identifying a subset of streamed sensor data, the sensor data captured from sensors deployed to monitor aspects of an industrial machine associated with at least one moving part of the machine, the subset of streamed sensor data at predefined lines of resolution for a predefined frequency range, and establishing a first logical route for communicating electronically between a first computing facility performing the identifying and a second computing facility, wherein identified subset of the streamed sensor data is communicated exclusively over the established first logical route when communicating the subset of streamed sensor data from the first facility to the second facility. This method may further include establishing a second logical route for communicating electronically between the first computing facility and the second computing facility for at least one portion of the streamed sensor data that is not the identified subset. Additionally, this method may further include establishing a third logical route for communicating electronically between the first computing facility and the second computing facility for at least one portion of the streamed sensor data that includes the identified subset and at least one other portion of the data not represented by the identified subset.

Methods and systems described herein for industrial machine sensor data streaming, collection, processing, and storage may be configured to operate and integrate with existing data collection, processing and storage systems and may include a first data sensing and processing system that captures first data from a first set of sensors deployed to monitor aspects of an industrial machine associated with at least one moving part of the machine, the first data covering a set of lines of resolution and a frequency range. This system may include a second data sensing and processing system that captures and streams a second set of data from a second set of sensors deployed to monitor aspects of the industrial machine associated with at least one moving part of the machine, the second data covering a plurality of lines of resolution that includes the set of lines of resolution and a plurality of frequencies that includes the frequency range. The system may enable selecting a portion of the second data that corresponds to the set of lines of resolution and the frequency range of the first data, and processing the selected portion of the second data with the first data sensing and processing system.

Methods and systems described herein for industrial machine sensor data streaming, collection, processing, and storage may be configured to operate and integrate with existing data collection, processing and storage systems and may include a method for automatically processing a portion of a stream of sensed data. The sensed data is received from a first set of sensors deployed to monitor aspects of an industrial machine associated with at least one moving part of the machine. The sensed data is in response to an electronic data structure that facilitates extracting a subset of the stream of sensed data that corresponds to a set of sensed data received from a second set of sensors deployed to monitor the aspects of the industrial machine associated with the at least one moving part of the machine. The set of sensed data is constrained to a frequency range. The stream of sensed data includes a range of frequencies that exceeds the frequency range of the set of sensed data, the processing comprising executing an algorithm on a portion of the stream of sensed data that is constrained to the frequency range of the set of sensed data, the algorithm configured to process the set of sensed data.

Methods and systems described herein for industrial machine sensor data streaming, collection, processing, and storage may be configured to operate and integrate with existing data collection, processing and storage systems and may include a method for receiving first data from sensors deployed to monitor aspects of an industrial machine associated with at least one moving part of the machine. This method may further include detecting at least one of a frequency range and lines of resolution represented by the first data; receiving a stream of data from sensors deployed to monitor the aspects of the industrial machine associated with the at least one moving part of the machine. The stream of data includes: (1) a plurality of frequency ranges and a plurality of lines of resolution that exceeds the frequency range and the lines of resolution represented by the first data; (2) a set of data extracted from the stream of data that corresponds to at least one of the frequency range and the lines of resolution represented by the first data; and (3) the extracted set of data which is processed with a data processing algorithm that is configured to process data within the frequency range and within the lines of resolution of the first data.

The present disclosure describes a system for monitoring vibration sensitive industrial equipment, the system according to one disclosed non-limiting embodiment of the present disclosure can include a data acquisition circuit structured to interpret a plurality of detection values, each of the plurality of detection values corresponding to input received from at least one of a plurality of input sensors, the plurality of input sensors including a detection package, each of the plurality of input sensors operatively coupled to at least one of a plurality of components of the vibration sensitive industrial equipment, a signal conditioning circuit structured to process a subset of the detection values on multiples of a key frequency associated with at least one of the plurality of components, a vibration analysis circuit structured to identify vibration in at least one of the plurality of components, a data analysis circuit structured to analyze the plurality of detection values and determine a status parameter value of the at least one of the plurality of component, and an analysis response circuit structured to take an action in response to the status parameter value.

In embodiments, the present disclosure may include wherein the at least one of the plurality of components includes at least one component selected from the group consisting of a motor, a conveyor, a mixer, an agitator, a centrifugal pump, a positive displacement pump, and a fan.

In embodiments, the present disclosure may include wherein the subset of the plurality of detection values includes a gap-free digital waveform, wherein the gap-free digital waveform corresponds to an input received from at least one of a vibration sensor or a tri-axial phase vibration sensor.

In embodiments, the present disclosure may include wherein the signal conditioning circuit includes a Delta-signal analog to digital converter.

In embodiments, the signal conditioning circuit is further structured to make a relative phase determination between two of the detection values, wherein the relative phase determination is performed using at least one technique selected from the techniques consisting of a waveform analysis, a phase-lock loop, a complex phase evolution analysis, and comparison with one of a timing signal and a trigger signal.

In embodiments, the signal conditioning circuit is further structured to perform a frequency component analysis for at least one of the detection values, wherein the frequency component analysis includes at least one of a digital Fast Fourier transform (FFT), a Laplace transform, a Z-transform, and a wavelet transform.

In embodiments, the system further includes an expert system circuit structured to organize the plurality of detection values into one or more data collection bands using a neural net.

In embodiments, the at least one data collection band includes at least one of a specific frequency band, a group of spectral peaks, a true-peak level, a crest factor derived from a time waveform, a utilization level, a process yield and an overall waveform derived from a vibration envelope.

In embodiments, the expert system circuit is further structured to classify at least one of an equipment type or identity of one of the plurality of components, one of the plurality of input sensors, and a type or identity of a distant device, the distant device including a device that is one of operationally or environmentally coupled to the vibration sensitive industrial equipment but is not one of the plurality of components.

In embodiments, the system further includes a data storage that stores at least one hierarchical template, each hierarchical template including at least one data collection route, each data collection route including a data collection routine for one of the plurality of input sensors, and wherein the data acquisition circuit is responsive to a selected hierarchical template.

The present disclosure describes a method for monitoring vibration sensitive industrial equipment, the method according to one disclosed non-limiting embodiment of the present disclosure can include interpreting a plurality of detection values, each of the plurality of detection values corresponding to input received from at least one of a plurality of input sensors, the plurality of input sensors including a detection package, each of the plurality of input sensors operatively coupled to at least one of a plurality of components, processing a subset of the detection values on multiples of a key frequency associated with at least one of the plurality of components, identifying a vibration in the at least one of the plurality of components, analyzing the plurality of detection values and determining a status parameter value of the at least one of the plurality of components, and performing an action in response to the status parameter value.

In embodiments, the at least one of the plurality of components includes at least one component selected from the group consisting of a motor, a conveyor, a mixer, an agitator, a centrifugal pump, a positive displacement pump and a fan.

In embodiments, the method further includes performing the action includes adjusting an equipment package, wherein adjusting the equipment package includes changing an equipment type, changing operating parameters for a piece of equipment, initiate amelioration of an equipment issue, or making recommendations regarding future equipment.

In embodiments, performing the action includes adjusting the detection package, wherein adjusting the detection package includes at least one operation selected from the operations consisting of adjusting a sensor range, adjusting a sensor scaling value, adjusting a sensor sampling frequency, and adjusting a utilized sensor value, the utilized sensor value indicating which sensor from a plurality of available sensors is utilized in the detection package, and wherein the plurality of available sensors have at least one distinct sensing parameter selected from the sensing parameters consisting of input ranges, sensitivity values, locations, reliability values, duty cycle values, and maintenance requirements.

In embodiments, at least one of the plurality of detection values includes a gap-free digital waveform, the at least one of the plurality of detection values corresponding to input received from a vibration sensor or a tri-axial phase vibration sensor.

In embodiments, the method further includes conditioning the at least one of the subset of the plurality of detection values including the gap-free digital waveform.

In embodiments, the conditioning includes increasing an over-sampling rate and reducing anti-aliasing operations.

In embodiments, the conditioning includes an operation selected from the operations consisting of using a clock divider, improving a signal to noise ratio, band pass filtering, and band pass tracking.

The present disclosure describes an apparatus for monitoring vibration sensitive industrial equipment, the apparatus according to one disclosed non-limiting embodiment of the present disclosure can include a data acquisition component configured to interpret a plurality of detection values, each of the plurality of detection values corresponding to input received from at least one of a plurality of input sensors, the plurality of input sensors including a detection package, each of the plurality of input sensors operatively coupled to at least one of a plurality of components of the vibration sensitive industrial equipment, a signal conditioning component configured to process a subset of the detection values on multiples of a key frequency associated with at least one of the plurality of components, a vibration analysis component configured to identify vibration in at least one of the plurality of components, a data analysis component configured to analyze the plurality of detection values and determine a status parameter value and an analysis response component configured to adjust the detection package in response to the status parameter value.

In embodiments, the plurality of sensors includes at least one of a vibration sensor or a tri-axial phase vibration sensor.

In embodiments, the signal conditioning component is further configured to condition at least one of subset of the plurality of detection values, by performing at least one operation from the operations consisting of increasing an over-sampling rate, reducing a sampling rate, using a clock divider, reducing an anti-aliasing operation, improving a signal to noise ratio, band pass filtering, and band pass tracking.

In embodiments, the apparatus further includes an expert system component configured to organize the plurality of detection values into one or more data collection bands using a neural net.

Methods and systems are disclosed herein for continuous ultrasonic monitoring, including providing continuous ultrasonic monitoring of rotating elements and bearings of an energy production facility; for cloud-based systems including machine pattern recognition based on the fusion of remote, analog industrial sensors or machine pattern analysis of state information from multiple analog industrial sensors to provide anticipated state information for an industrial system; for on-device sensor fusion and data storage for industrial IoT devices, including on-device sensor fusion and data storage for an Industrial IoT device, where data from multiple sensors are multiplexed at the device for storage of a fused data stream; and for self-organizing systems including a self-organizing data marketplace for industrial IoT data, including a self-organizing data marketplace for industrial IoT data, where available data elements are organized in the marketplace for consumption by consumers based on training a self-organizing facility with a training set and feedback from measures of marketplace success, for self-organizing data pools, including self-organization of data pools based on utilization and/or yield metrics, including utilization and/or yield metrics that are tracked for a plurality of data pools, a self-organized swarm of industrial data collectors, including a self-organizing swarm of industrial data collectors that organize among themselves to optimize data collection based on the capabilities and conditions of the members of the swarm, a self-organizing collector, including a self-organizing, multi-sensor data collector that can optimize data collection, power and/or yield based on conditions in its environment, a self-organizing storage for a multi-sensor data collector, including self-organizing storage for a multi-sensor data collector for industrial sensor data, a self-organizing network coding for a multi-sensor data network, including self-organizing network coding for a data network that transports data from multiple sensors in an industrial data collection environment.

Methods and systems are disclosed herein for training artificial intelligence ("AI") models based on industry-specific feedback, including training an AI model based on industry-specific feedback that reflects a measure of utilization, yield, or impact, where the AI model operates on sensor data from an industrial environment; for an industrial IoT distributed ledger, including a distributed ledger supporting the tracking of transactions executed in an automated data marketplace for industrial IoT data; for a network-sensitive collector, including a network condition-sensitive, self-organizing, multi-sensor data collector that can optimize based on bandwidth, quality of service, pricing, and/or other network conditions; for a remotely organized universal data collector that can power up and down sensor interfaces based on need and/or conditions identified in an industrial data collection environment; and for a haptic or multi-sensory user interface, including a wearable haptic or multi-sensory user interface for an industrial sensor data collector, with vibration, heat, electrical, and/or sound outputs.

Methods and systems are disclosed herein for a presentation layer for augmented reality and virtual reality (AR/VR) industrial glasses, where heat map elements are presented based on patterns and/or parameters in collected data; and for condition-sensitive, self-organized tuning of AR/VR interfaces based on feedback metrics and/or training in industrial environments.

In embodiments, a system for data collection, processing, and utilization of signals from at least a first element in a first machine in an industrial environment includes a platform including a computing environment connected to a local data collection system having at least a first sensor signal and a second sensor signal obtained from at least the first machine in the industrial environment. The system includes a first sensor in the local data collection system configured to be connected to the first machine and a second sensor in the local data collection system. The system further includes a crosspoint switch in the local data collection system having multiple inputs and multiple outputs including a first input connected to the first sensor and a second input connected to the second sensor. Throughout the present disclosure, wherever a crosspoint switch, multiplexer (MUX) device, or other multiple-input multiple-output data collection or communication device is described, any multi-sensor acquisition device is also contemplated herein. In certain embodiments, a multi-sensor acquisition device includes one or more channels configured for, or compatible with, an analog sensor input. The multiple outputs include a first output and second output configured to be switchable between a condition in which the first output is configured to switch between delivery of the first sensor signal and the second sensor signal and a condition in which there is simultaneous delivery of the first sensor signal from the first output and the second sensor signal from the second output. Each of multiple inputs is configured to be individually assigned to any of the multiple outputs, or combined in any subsets of the inputs to the outputs. Unassigned outputs are configured to be switched off, for example by producing a high-impedance state.

In embodiments, the first sensor signal and the second sensor signal are continuous vibration data about the industrial environment. In embodiments, the second sensor in the local data collection system is configured to be connected to the first machine. In embodiments, the second sensor in the local data collection system is configured to be connected to a second machine in the industrial environment. In embodiments, the computing environment of the platform is configured to compare relative phases of the first and second sensor signals. In embodiments, the first sensor is a single-axis sensor and the second sensor is a three-axis sensor. In embodiments, at least one of the multiple inputs of the crosspoint switch includes internet protocol, front-end signal conditioning, for improved signal-to-noise ratio. In embodiments, the crosspoint switch includes a third input that is configured with a continuously monitored alarm having a pre-determined trigger condition when the third input is unassigned to or undetected at any of the multiple outputs.

In embodiments, the local data collection system includes multiple multiplexing units and multiple data acquisition units receiving multiple data streams from multiple machines in the industrial environment. In embodiments, the local data collection system includes distributed complex programmable hardware device ("CPLD") chips each dedicated to a data bus for logic control of the multiple multiplexing units and the multiple data acquisition units that receive the multiple data streams from the multiple machines in the industrial environment. In embodiments, the local data collection system is configured to provide high-amperage input capability using solid state relays. In embodiments, the local data collection system is configured to power-down at least one of an analog sensor channel and a component board.

In embodiments, the local data collection system includes a phase-lock loop bandpass tracking filter configured to obtain slow-speed revolutions per minute ("RPMs") and phase information. In embodiments, the local data collection system is configured to digitally derive phase using on-board timers relative to at least one trigger channel and at least one of the multiple inputs. In embodiments, the local data collection system includes a peak-detector configured to autoscale using a separate analog-to-digital converter for peak detection. In embodiments, the local data collection system is configured to route at least one trigger channel that is raw and buffered into at least one of the multiple inputs. In embodiments, the local data collection system includes at least one delta-sigma analog-to-digital converter that is configured to increase input oversampling rates to reduce sampling rate outputs and to minimize anti-aliasing filter requirements. In embodiments, the distributed CPLD chips each dedicated to the data bus for logic control of the multiple multiplexing units and the multiple data acquisition units includes as high-frequency crystal clock reference configured to be divided by at least one of the distributed CPLD chips for at least one delta-sigma analog-to-digital converter to achieve lower sampling rates without digital resampling.

In embodiments, the local data collection system is configured to obtain long blocks of data at a single relatively high-sampling rate as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units each having an onboard card set configured to store calibration information and maintenance history of a data acquisition unit in which the onboard card set is located. In embodiments, the local data collection system is configured to plan data acquisition routes based on hierarchical templates.

In embodiments, the local data collection system is configured to manage data collection bands. In embodiments, the data collection bands define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system is configured to create data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the local data collection system includes a graphical user interface ("GUI") system configured to manage the data collection bands. In embodiments, the GUI system includes an expert system diagnostic tool. In embodiments, the platform includes cloud-based, machine pattern analysis of state information from multiple sensors to provide anticipated state information for the industrial environment. In embodiments, the platform is configured to provide self-organization of data pools based on at least one of the utilization metrics and yield metrics. In embodiments, the platform includes a self-organized swarm of industrial data collectors. In embodiments, the local data collection system includes a wearable haptic user interface for an industrial sensor data collector with at least one of vibration, heat, electrical, and sound outputs.

In embodiments, multiple inputs of the crosspoint switch include a third input connected to the second sensor and a fourth input connected to the second sensor. The first sensor signal is from a single-axis sensor at an unchanging location associated with the first machine. In embodiments, the second sensor is a three-axis sensor. In embodiments, the local data collection system is configured to record gap-free digital waveform data simultaneously from at least the first input, the second input, the third input, and the fourth input. In embodiments, the platform is configured to determine a change in relative phase based on the simultaneously recorded gap-free digital waveform data. In embodiments, the second sensor is configured to be movable to a plurality of positions associated with the first machine while obtaining the simultaneously recorded gap-free digital waveform data. In embodiments, multiple outputs of the crosspoint switch include a third output and fourth output. The second, third, and fourth outputs are assigned together to a sequence of tri-axial sensors each located at different positions associated with the machine. In embodiments, the platform is configured to determine an operating deflection shape based on the change in relative phase and the simultaneously recorded gap-free digital waveform data.

In embodiments, the unchanging location is a position associated with the rotating shaft of the first machine. In embodiments, tri-axial sensors in the sequence of the tri-axial sensors are each located at different positions on the first machine but are each associated with different bearings in the machine. In embodiments, tri-axial sensors in the sequence of the tri-axial sensors are each located at similar positions associated with similar bearings but are each associated with different machines. In embodiments, the local data collection system is configured to obtain the simultaneously recorded gap-free digital waveform data from the first machine while the first machine and a second machine are both in operation. In embodiments, the local data collection system is configured to characterize a contribution from the first machine and the second machine in the simultaneously recorded gap-free digital waveform data from the first machine. In embodiments, the simultaneously recorded gap-free digital waveform data has a duration that is in excess of one minute.

In embodiments, a method of monitoring a machine having at least one shaft supported by a set of bearings includes monitoring a first data channel assigned to a single-axis sensor at an unchanging location associated with the machine. The method includes monitoring second, third, and fourth data channels each assigned to an axis of a three-axis sensor. The method includes recording gap-free digital waveform data simultaneously from all of the data channels while the machine is in operation and determining a change in relative phase based on the digital waveform data.

In embodiments, the tri-axial sensor is located at a plurality of positions associated with the machine while obtaining the digital waveform. In embodiments, the second, third, and fourth channels are assigned together to a sequence of tri-axial sensors each located at different positions associated with the machine. In embodiments, the data is received from all of the sensors simultaneously. In embodiments, the method includes determining an operating deflection shape based on the change in relative phase information and the waveform data. In embodiments, the unchanging location is a position associated with the shaft of the machine. In embodiments, the tri-axial sensors in the sequence of the tri-axial sensors are each located at different positions and are each associated with different bearings in the machine. In embodiments, the unchanging location is a position associated with the shaft of the machine. The tri-axial sensors in the sequence of the tri-axial sensors are each located at different positions and are each associated with different bearings that support the shaft in the machine.

In embodiments, the method includes monitoring the first data channel assigned to the single-axis sensor at an unchanging location located on a second machine. The method includes monitoring the second, the third, and the fourth data channels, each assigned to the axis of a three-axis sensor that is located at the position associated with the second machine. The method also includes recording gap-free digital waveform data simultaneously from all of the data channels from the second machine while both of the machines are in operation. In embodiments, the method includes characterizing the contribution from each of the machines in the gap-free digital waveform data simultaneously from the second machine.

In embodiments, a method for data collection, processing, and utilization of signals with a platform monitoring at least a first element in a first machine in an industrial environment includes obtaining, automatically with a computing environment, at least a first sensor signal and a second sensor signal with a local data collection system that monitors at least the first machine. The method includes connecting a first input of a crosspoint switch of the local data collection system to a first sensor and a second input of the crosspoint switch to a second sensor in the local data collection system. The method includes switching between a condition in which a first output of the crosspoint switch alternates between delivery of at least the first sensor signal and the second sensor signal and a condition in which there is simultaneous delivery of the first sensor signal from the first output and the second sensor signal from a second output of the crosspoint switch. The method also includes switching off unassigned outputs of the crosspoint switch into a high-impedance state.

In embodiments, the first sensor signal and the second sensor signal are continuous vibration data from the industrial environment. In embodiments, the second sensor in the local data collection system is connected to the first machine. In embodiments, the second sensor in the local data collection system is connected to a second machine in the industrial environment. In embodiments, the method includes comparing, automatically with the computing environment, relative phases of the first and second sensor signals. In embodiments, the first sensor is a single-axis sensor and the second sensor is a three-axis sensor. In embodiments, at least the first input of the crosspoint switch includes internet protocol front-end signal conditioning for improved signal-to-noise ratio.

In embodiments, the method includes continuously monitoring at least a third input of the crosspoint switch with an alarm having a pre-determined trigger condition when the third input is unassigned to any of multiple outputs on the crosspoint switch. In embodiments, the local data collection system includes multiple multiplexing units and multiple data acquisition units receiving multiple data streams from multiple machines in the industrial environment. In embodiments, the local data collection system includes distributed CPLD chips each dedicated to a data bus for logic control of the multiple multiplexing units and the multiple data acquisition units that receive the multiple data streams from the multiple machines in the industrial environment. In embodiments, the local data collection system provides high-amperage input capability using solid state relays.

In embodiments, the method includes powering down at least one of an analog sensor channel and a component board of the local data collection system. In embodiments, the local data collection system includes an external voltage reference for an A/D zero reference that is independent of the voltage of the first sensor and the second sensor. In embodiments, the local data collection system includes a phase-lock loop bandpass tracking filter that obtains slow-speed RPMs and phase information. In embodiments, the method includes digitally deriving phase using on-board timers relative to at least one trigger channel and at least one of multiple inputs on the crosspoint switch.

In embodiments, the method includes autoscaling with a peak-detector using a separate analog-to-digital converter for peak detection. In embodiments, the method includes routing at least one trigger channel that is raw and buffered into at least one of multiple inputs on the crosspoint switch. In embodiments, the method includes increasing input oversampling rates with at least one delta-sigma analog-to-digital converter to reduce sampling rate outputs and to minimize anti-aliasing filter requirements. In embodiments, the distributed CPLD chips are each dedicated to the data bus for logic control of the multiple multiplexing units and the multiple data acquisition units and each include a high-frequency crystal clock reference divided by at least one of the distributed CPLD chips for at least one delta-sigma analog-to-digital converter to achieve lower sampling rates without digital resampling. In embodiments, the method includes obtaining long blocks of data at a single relatively high-sampling rate with the local data collection system as opposed to multiple sets of data taken at different sampling rates. In embodiments, the single relatively high-sampling rate corresponds to a maximum frequency of about forty kilohertz. **In** embodiments, the long blocks of data are for a duration that is in excess of one minute. **In** embodiments, the local data collection system includes multiple data acquisition units and each data acquisition unit has an onboard card set that stores calibration information and maintenance history of a data acquisition unit in which the onboard card set is located.

**In** embodiments, the method includes planning data acquisition routes based on hierarchical templates associated with at least the first element in the first machine in the industrial environment. **In** embodiments, the local data collection system manages data collection bands that define a specific frequency band and at least one of a group of spectral peaks, a true-peak level, a crest factor derived from a time waveform, and an overall waveform derived from a vibration envelope. **In** embodiments, the local data collection system includes a neural net expert system using intelligent management of the data collection bands. **In** embodiments, the local data collection system creates data acquisition routes based on hierarchical templates that each include the data collection bands related to machines associated with the data acquisition routes. **In** embodiments, at least one of the hierarchical templates is associated with multiple interconnected elements of the first machine. **In** embodiments, at least one of the hierarchical templates is associated with similar elements associated with at least the first machine and a second machine. **In** embodiments, at least one of the hierarchical templates is associated with at least the first machine being proximate in location to a second machine.

**In** embodiments, the method includes controlling a GUI system of the local data collection system to manage the data collection bands. The GUI system includes an expert system diagnostic tool. **In** embodiments, the computing environment of the platform includes cloud-based, machine pattern analysis of state information from multiple sensors to provide anticipated state information for the industrial environment. **In** embodiments, the computing environment of the platform provides self-organization of data pools based on at least one of the utilization metrics and yield metrics. **In** embodiments, the computing environment of the platform includes a self-organized swarm of industrial data collectors. **In** embodiments, each of multiple inputs of the crosspoint switch is individually assignable to any of multiple outputs of the crosspoint switch.

Methods and systems described herein for industrial machine sensor data streaming, collection, processing, and storage may be configured to operate and integrate with existing data collection, processing and storage systems and may include a method for capturing a plurality of streams of sensed data from sensors deployed to monitor aspects of an industrial machine associated with at least one moving part of the machine; at least one of the streams contains a plurality of frequencies of data. The method may include identifying a subset of data in at least one of the plurality of streams that corresponds to data representing at least one predefined frequency. The at least one predefined frequency is represented by a set of data collected from alternate sensors deployed to monitor aspects of the industrial machine associated with the at least one moving part of the machine. The method may further include processing the identified data with a data processing facility that processes the identified data with an algorithm configured to be applied to the set of data collected from alternate sensors. Lastly, the method may include storing the at least one of the streams of data, the identified subset of data, and a result of processing the identified data in an electronic data set.

Methods and systems described herein for industrial machine sensor data streaming, collection, processing, and storage may be configured to operate and integrate with existing data collection, processing, and storage systems and may include a method for applying data captured from sensors deployed to monitor aspects of an industrial machine associated with at least one moving part of the machine. The data is captured with predefined lines of resolution covering a predefined frequency range and is sent to a frequency matching facility that identifies a subset of data streamed from other sensors deployed to monitor aspects of the industrial machine associated with at least one moving part of the machine. The streamed data includes a plurality of lines of resolution and frequency ranges. The subset of data identified corresponds to the lines of resolution and predefined frequency range. This method may include storing the subset of data in an electronic data record in a format that corresponds to a format of the data captured with predefined lines of resolution and signaling to a data processing facility the presence of the stored subset of data. This method may, optionally, include processing the subset of data with at least one set of algorithms, models and pattern recognizers that corresponds to algorithms, models and pattern recognizers associated with processing the data captured with predefined lines of resolution covering a predefined frequency range.

Methods and systems described herein for industrial machine sensor data streaming, collection, processing, and storage may be configured to operate and integrate with existing data collection, processing and storage systems and may include a method for identifying a subset of streamed sensor data, the sensor data captured from sensors deployed to monitor aspects of an industrial machine associated with at least one moving part of the machine, the subset of streamed sensor data at predefined lines of resolution for a predefined frequency range, and establishing a first logical route for communicating electronically between a first computing facility performing the identifying and a second computing facility, wherein identified subset of the streamed sensor data is communicated exclusively over the established first logical route when communicating the subset of streamed sensor data from the first facility to the second facility. This method may further include establishing a second logical route for communicating electronically between the first computing facility and the second computing facility for at least one portion of the streamed sensor data that is not the identified subset. Additionally, this method may further include establishing a third logical route for communicating electronically between the first computing facility and the second computing facility for at least one portion of the streamed sensor data that includes the identified subset and at least one other portion of the data not represented by the identified subset.

Methods and systems described herein for industrial machine sensor data streaming, collection, processing, and storage may be configured to operate and integrate with existing data collection, processing and storage systems and may include a first data sensing and processing system that captures first data from a first set of sensors deployed to monitor aspects of an industrial machine associated with at least one moving part of the machine, the first data covering a set of lines of resolution and a frequency range. This system may include a second data sensing and processing system that captures and streams a second set of data from a second set of sensors deployed to monitor aspects of the industrial machine associated with at least one moving part of the machine, the second data covering a plurality of lines of resolution that includes the set of lines of resolution and a plurality of frequencies that includes the frequency range. The system may enable selecting a portion of the second data that corresponds to the set of lines of resolution and the frequency range of the first data, and processing the selected portion of the second data with the first data sensing and processing system.

Methods and systems described herein for industrial machine sensor data streaming, collection, processing, and storage may be configured to operate and integrate with existing data collection, processing and storage systems and may include a method for automatically processing a portion of a stream of sensed data. The sensed data is received from a first set of sensors deployed to monitor aspects of an industrial machine associated with at least one moving part of the machine. The sensed data is in response to an electronic data structure that facilitates extracting a subset of the stream of sensed data that corresponds to a set of sensed data received from a second set of sensors deployed to monitor the aspects of the industrial machine associated with the at least one moving part of the machine. The set of sensed data is constrained to a frequency range. The stream of sensed data includes a range of frequencies that exceeds the frequency range of the set of sensed data, the processing comprising executing an algorithm on a portion of the stream of sensed data that is constrained to the frequency range of the set of sensed data, the algorithm configured to process the set of sensed data.

Methods and systems described herein for industrial machine sensor data streaming, collection, processing, and storage may be configured to operate and integrate with existing data collection, processing and storage systems and may include a method for receiving first data from sensors deployed to monitor aspects of an industrial machine associated with at least one moving part of the machine. This method may further include detecting at least one of a frequency range and lines of resolution represented by the first data; receiving a stream of data from sensors deployed to monitor the aspects of the industrial machine associated with the at least one moving part of the machine. The stream of data includes: (1) a plurality of frequency ranges and a plurality of lines of resolution that exceeds the frequency range and the lines of resolution represented by the first data; (2) a set of data extracted from the stream of data that corresponds to at least one of the frequency range and the lines of resolution represented by the first data; and (3) the extracted set of data which is processed with a data processing algorithm that is configured to process data within the frequency range and within the lines of resolution of the first data.

The present disclosure describes a system for data collection in a production environment, the system according to one disclosed non-limiting embodiment of the present disclosure can include a data collector communicatively coupled to a plurality of input channels, wherein a first subset of the plurality of input channels are connected to a first set of sensors measuring operational parameters from a production component, a data storage structured to store a plurality of collector routes and collected data that correspond to the plurality of input channels, wherein the plurality of collector routes each includes a different data collection routine including collection of data from the production component, a data acquisition circuit structured to interpret a plurality of detection values from the collected data of the production component, each of the plurality of detection values corresponding to at least one of the first subset of the plurality of input channels, and a data analysis circuit structured to analyze the collected data from the first of the subset of the plurality of input channels and evaluate a first collection routine of the data collector based on the analyzed collected data, wherein based on the analyzed collected data the data collector makes a collection routine change, wherein the collection routine change is a change from the first collection routine including the first subset of the plurality of input channels to a second collection routine including a second subset of the plurality of input channels.

In embodiments, the production component is a pump, mixer, agitator, conveyor, motor, source water component, or storage tank.

In embodiments, the collection routine change increases a level of sensor monitoring to the production component.

In embodiments, the level of sensor monitoring is increased to determine a current state, future state, condition, or process stage of the production component.

In embodiments, the level of sensor monitoring is increased to respond to an event that was detected by the data analysis circuit.

In embodiments, the collection routine change adjusts the subset of the plurality of input channels to increase life cycle monitoring, a duty cycle monitoring, operating mode monitoring, or event monitoring.

In embodiments, the collection routine change adjusts a sensor measurement capability.

In embodiments, the sensor measurement capability is an activation or deactivation of a sensor.

In embodiments, the sensor measurement capability is to change the location at which a sensed parameter is measured.

In embodiments, the change in location is executed by changing the input channel connection to a similar sensor in a different location.

In embodiments, the first subset of the plurality of input channels and the second subset of the plurality of input channels are connected to sensors located on the production component.

In embodiments, the first subset of the plurality of input channels and the second subset of the plurality of input channels are connected to sensors located on the similar but distinct production components.

In embodiments, the collection routing change is based in part on a frequency analysis of the collected data from the production component.

In embodiments, the frequency analysis analyzes a peak frequency, a crest factor, or a time waveform associated with the operation of the production component.

The present disclosure describes a computer-implemented method for monitoring data collection in a production environment, the method according to one disclosed non-limiting embodiment of the present disclosure can include providing a data collector communicatively coupled to a plurality of input channels, wherein a first subset of the plurality of input channels are connected to a first set of sensors measuring operational parameters from a production component, providing a data storage structured to store a plurality of collector routes and collected data that correspond to the plurality of input channels, wherein the plurality of collector routes each includes a different data collection routine including collection of data from the production component, providing a data acquisition circuit structured to interpret a plurality of detection values from the collected data of the production component, each of the plurality of detection values corresponding to at least one of the first subset of the plurality of input channels, and providing a data analysis circuit structured to analyze the collected data from the first of the subset of the plurality of input channels and evaluate a first collection routine of the data collector based on the analyzed collected data, wherein based on the analyzed collected data the data collector makes a collection routine change, wherein the collection routine change is a change from the first collection routine including the first subset of the plurality of input channels to a second collection routine including a second subset of the plurality of input channels.

In embodiments, the production component is a pump, mixer, agitator, conveyor, motor, source water component, or storage tank.

In embodiments, the collection routine change increases a level of sensor monitoring to the production component.

The present disclosure describes a monitoring apparatus for data collection in a production environment, the apparatus according to one disclosed non-limiting embodiment of the present disclosure can include a data collector component communicatively coupled to a plurality of input channels, wherein a first subset of the plurality of input channels are connected to a first set of sensors measuring operational parameters from a production component, a data storage component structured to store a plurality of collector routes and collected data that correspond to the plurality of input channels, wherein the plurality of collector routes each includes a different data collection routine including collection of data from the production component, a data acquisition component structured to interpret a plurality of detection values from the collected data of the production component, each of the plurality of detection values corresponding to at least one of the first subset of the plurality of input channels, and a data analysis component structured to analyze the collected data from the first of the subset of the plurality of input channels and evaluate a first collection routine of the data collector based on the analyzed collected data, wherein based on the analyzed collected data the data collector makes a collection routine change, wherein the collection routine change is a change from the first collection routine including the first subset of the plurality of input channels to a second collection routine including a second subset of the plurality of input channels.

In embodiments, the production component is a pump, mixer, agitator, conveyor, motor, source water component, or storage tank.

In embodiments, the collection routine change increases a level of sensor monitoring to the production component.

Methods and systems are disclosed herein for continuous ultrasonic monitoring, including providing continuous ultrasonic monitoring of rotating elements and bearings of an energy production facility; for cloud-based systems including machine pattern recognition based on the fusion of remote, analog industrial sensors or machine pattern analysis of state information from multiple analog industrial sensors to provide anticipated state information for an industrial system; for on-device sensor fusion and data storage for industrial IoT devices, including on-device sensor fusion and data storage for an Industrial IoT device, where data from multiple sensors are multiplexed at the device for storage of a fused data stream; and for self-organizing systems including a self-organizing data marketplace for industrial IoT data, including a self-organizing data marketplace for industrial IoT data, where available data elements are organized in the marketplace for consumption by consumers based on training a self-organizing facility with a training set and feedback from measures of marketplace success, for self-organizing data pools, including self-organization of data pools based on utilization and/or yield metrics, including utilization and/or yield metrics that are tracked for a plurality of data pools, a self-organized swarm of industrial data collectors, including a self-organizing swarm of industrial data collectors that organize among themselves to optimize data collection based on the capabilities and conditions of the members of the swarm, a self-organizing collector, including a self-organizing, multi-sensor data collector that can optimize data collection, power and/or yield based on conditions in its environment, a self-organizing storage for a multi-sensor data collector, including self-organizing storage for a multi-sensor data collector for industrial sensor data, a self-organizing network coding for a multi-sensor data network, including self-organizing network coding for a data network that transports data from multiple sensors in an industrial data collection environment.

Methods and systems are disclosed herein for training artificial intelligence ("AI") models based on industry-specific feedback, including training an AI model based on industry-specific feedback that reflects a measure of utilization, yield, or impact, where the AI model operates on sensor data from an industrial environment; for an industrial IoT distributed ledger, including a distributed ledger supporting the tracking of transactions executed in an automated data marketplace for industrial IoT data; for a network-sensitive collector, including a network condition-sensitive, self-organizing, multi-sensor data collector that can optimize based on bandwidth, quality of service, pricing, and/or other network conditions; for a remotely organized universal data collector that can power up and down sensor interfaces based on need and/or conditions identified in an industrial data collection environment; and for a haptic or multi-sensory user interface, including a wearable haptic or multi-sensory user interface for an industrial sensor data collector, with vibration, heat, electrical, and/or sound outputs.

Methods and systems are disclosed herein for a presentation layer for augmented reality and virtual reality (AR/VR) industrial glasses, where heat map elements are presented based on patterns and/or parameters in collected data; and for condition-sensitive, self-organized tuning of AR/VR interfaces based on feedback metrics and/or training in industrial environments.

In embodiments, a system for data collection, processing, and utilization of signals from at least a first element in a first machine in an industrial environment includes a platform including a computing environment connected to a local data collection system having at least a first sensor signal and a second sensor signal obtained from at least the first machine in the industrial environment. The system includes a first sensor in the local data collection system configured to be connected to the first machine and a second sensor in the local data collection system. The system further includes a crosspoint switch in the local data collection system having multiple inputs and multiple outputs including a first input connected to the first sensor and a second input connected to the second sensor. Throughout the present disclosure, wherever a crosspoint switch, multiplexer (MUX) device, or other multiple-input multiple-output data collection or communication device is described, any multi-sensor acquisition device is also contemplated herein. In certain embodiments, a multi-sensor acquisition device includes one or more channels configured for, or compatible with, an analog sensor input. The multiple outputs include a first output and second output configured to be switchable between a condition in which the first output is configured to switch between delivery of the first sensor signal and the second sensor signal and a condition in which there is simultaneous delivery of the first sensor signal from the first output and the second sensor signal from the second output. Each of multiple inputs is configured to be individually assigned to any of the multiple outputs, or combined in any subsets of the inputs to the outputs. Unassigned outputs are configured to be switched off, for example by producing a high-impedance state.

In embodiments, the first sensor signal and the second sensor signal are continuous vibration data about the industrial environment. In embodiments, the second sensor in the local data collection system is configured to be connected to the first machine. In embodiments, the second sensor in the local data collection system is configured to be connected to a second machine in the industrial environment. In embodiments, the computing environment of the platform is configured to compare relative phases of the first and second sensor signals. In embodiments, the first sensor is a single-axis sensor and the second sensor is a three-axis sensor. In embodiments, at least one of the multiple inputs of the crosspoint switch includes internet protocol, front-end signal conditioning, for improved signal-to-noise ratio. In embodiments, the crosspoint switch includes a third input that is configured with a continuously monitored alarm having a pre-determined trigger condition when the third input is unassigned to or undetected at any of the multiple outputs.

In embodiments, the local data collection system includes multiple multiplexing units and multiple data acquisition units receiving multiple data streams from multiple machines in the industrial environment. In embodiments, the local data collection system includes distributed complex programmable hardware device ("CPLD") chips each dedicated to a data bus for logic control of the multiple multiplexing units and the multiple data acquisition units that receive the multiple data streams from the multiple machines in the industrial environment. In embodiments, the local data collection system is configured to provide high-amperage input capability using solid state relays. In embodiments, the local data collection system is configured to power-down at least one of an analog sensor channel and a component board.

In embodiments, the local data collection system includes a phase-lock loop bandpass tracking filter configured to obtain slow-speed revolutions per minute ("RPMs") and phase information. In embodiments, the local data collection system is configured to digitally derive phase using on-board timers relative to at least one trigger channel and at least one of the multiple inputs. In embodiments, the local data collection system includes a peak-detector configured to autoscale using a separate analog-to-digital converter for peak detection. In embodiments, the local data collection system is configured to route at least one trigger channel that is raw and buffered into at least one of the multiple inputs. In embodiments, the local data collection system includes at least one delta-sigma analog-to-digital converter that is configured to increase input oversampling rates to reduce sampling rate outputs and to minimize anti-aliasing filter requirements. In embodiments, the distributed CPLD chips each dedicated to the data bus for logic control of the multiple multiplexing units and the multiple data acquisition units includes as high-frequency crystal clock reference configured to be divided by at least one of the distributed CPLD chips for at least one delta-sigma analog-to-digital converter to achieve lower sampling rates without digital resampling.

In embodiments, the local data collection system is configured to obtain long blocks of data at a single relatively high-sampling rate as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units each having an onboard card set configured to store calibration information and maintenance history of a data acquisition unit in which the onboard card set is located. In embodiments, the local data collection system is configured to plan data acquisition routes based on hierarchical templates.

In embodiments, the local data collection system is configured to manage data collection bands. In embodiments, the data collection bands define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system is configured to create data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the local data collection system includes a graphical user interface ("GUI") system configured to manage the data collection bands. In embodiments, the GUI system includes an expert system diagnostic tool. In embodiments, the platform includes cloud-based, machine pattern analysis of state information from multiple sensors to provide anticipated state information for the industrial environment. In embodiments, the platform is configured to provide self-organization of data pools based on at least one of the utilization metrics and yield metrics. In embodiments, the platform includes a self-organized swarm of industrial data collectors. In embodiments, the local data collection system includes a wearable haptic user interface for an industrial sensor data collector with at least one of vibration, heat, electrical, and sound outputs.

In embodiments, multiple inputs of the crosspoint switch include a third input connected to the second sensor and a fourth input connected to the second sensor. The first sensor signal is from a single-axis sensor at an unchanging location associated with the first machine. In embodiments, the second sensor is a three-axis sensor. In embodiments, the local data collection system is configured to record gap-free digital waveform data simultaneously from at least the first input, the second input, the third input, and the fourth input. In embodiments, the platform is configured to determine a change in relative phase based on the simultaneously recorded gap-free digital waveform data. In embodiments, the second sensor is configured to be movable to a plurality of positions associated with the first machine while obtaining the simultaneously recorded gap-free digital waveform data. In embodiments, multiple outputs of the crosspoint switch include a third output and fourth output. The second, third, and fourth outputs are assigned together to a sequence of tri-axial sensors each located at different positions associated with the machine. In embodiments, the platform is configured to determine an operating deflection shape based on the change in relative phase and the simultaneously recorded gap-free digital waveform data.

In embodiments, the unchanging location is a position associated with the rotating shaft of the first machine. In embodiments, tri-axial sensors in the sequence of the tri-axial sensors are each located at different positions on the first machine but are each associated with different bearings in the machine. In embodiments, tri-axial sensors in the sequence of the tri-axial sensors are each located at similar positions associated with similar bearings but are each associated with different machines. In embodiments, the local data collection system is configured to obtain the simultaneously recorded gap-free digital waveform data from the first machine while the first machine and a second machine are both in operation. In embodiments, the local data collection system is configured to characterize a contribution from the first machine and the second machine in the simultaneously recorded gap-free digital waveform data from the first machine. In embodiments, the simultaneously recorded gap-free digital waveform data has a duration that is in excess of one minute.

In embodiments, a method of monitoring a machine having at least one shaft supported by a set of bearings includes monitoring a first data channel assigned to a single-axis sensor at an unchanging location associated with the machine. The method includes monitoring second, third, and fourth data channels each assigned to an axis of a three-axis sensor. The method includes recording gap-free digital waveform data simultaneously from all of the data channels while the machine is in operation and determining a change in relative phase based on the digital waveform data.

In embodiments, the tri-axial sensor is located at a plurality of positions associated with the machine while obtaining the digital waveform. In embodiments, the second, third, and fourth channels are assigned together to a sequence of tri-axial sensors each located at different positions associated with the machine. In embodiments, the data is received from all of the sensors simultaneously. In embodiments, the method includes determining an operating deflection shape based on the change in relative phase information and the waveform data. In embodiments, the unchanging location is a position associated with the shaft of the machine. In embodiments, the tri-axial sensors in the sequence of the tri-axial sensors are each located at different positions and are each associated with different bearings in the machine. In embodiments, the unchanging location is a position associated with the shaft of the machine. The tri-axial sensors in the sequence of the tri-axial sensors are each located at different positions and are each associated with different bearings that support the shaft in the machine.

In embodiments, the method includes monitoring the first data channel assigned to the single-axis sensor at an unchanging location located on a second machine. The method includes monitoring the second, the third, and the fourth data channels, each assigned to the axis of a three-axis sensor that is located at the position associated with the second machine. The method also includes recording gap-free digital waveform data simultaneously from all of the data channels from the second machine while both of the machines are in operation. In embodiments, the method includes characterizing the contribution from each of the machines in the gap-free digital waveform data simultaneously from the second machine.

In embodiments, a method for data collection, processing, and utilization of signals with a platform monitoring at least a first element in a first machine in an industrial environment includes obtaining, automatically with a computing environment, at least a first sensor signal and a second sensor signal with a local data collection system that monitors at least the first machine. The method includes connecting a first input of a crosspoint switch of the local data collection system to a first sensor and a second input of the crosspoint switch to a second sensor in the local data collection system. The method includes switching between a condition in which a first output of the crosspoint switch alternates between delivery of at least the first sensor signal and the second sensor signal and a condition in which there is simultaneous delivery of the first sensor signal from the first output and the second sensor signal from a second output of the crosspoint switch. The method also includes switching off unassigned outputs of the crosspoint switch into a high-impedance state.

In embodiments, the first sensor signal and the second sensor signal are continuous vibration data from the industrial environment. In embodiments, the second sensor in the local data collection system is connected to the first machine. In embodiments, the second sensor in the local data collection system is connected to a second machine in the industrial environment. In embodiments, the method includes comparing, automatically with the computing environment, relative phases of the first and second sensor signals. In embodiments, the first sensor is a single-axis sensor and the second sensor is a three-axis sensor. In embodiments, at least the first input of the crosspoint switch includes internet protocol front-end signal conditioning for improved signal-to-noise ratio.

In embodiments, the method includes continuously monitoring at least a third input of the crosspoint switch with an alarm having a pre-determined trigger condition when the third input is unassigned to any of multiple outputs on the crosspoint switch. In embodiments, the local data collection system includes multiple multiplexing units and multiple data acquisition units receiving multiple data streams from multiple machines in the industrial environment. In embodiments, the local data collection system includes distributed CPLD chips each dedicated to a data bus for logic control of the multiple multiplexing units and the multiple data acquisition units that receive the multiple data streams from the multiple machines in the industrial environment. In embodiments, the local data collection system provides high-amperage input capability using solid state relays.

In embodiments, the method includes powering down at least one of an analog sensor channel and a component board of the local data collection system. In embodiments, the local data collection system includes an external voltage reference for an A/D zero reference that is independent of the voltage of the first sensor and the second sensor. In embodiments, the local data collection system includes a phase-lock loop bandpass tracking filter that obtains slow-speed RPMs and phase information. In embodiments, the method includes digitally deriving phase using on-board timers relative to at least one trigger channel and at least one of multiple inputs on the crosspoint switch.

In embodiments, the method includes auto-scaling with a peak-detector using a separate analog-to-digital converter for peak detection. In embodiments, the method includes routing at least one trigger channel that is raw and buffered into at least one of multiple inputs on the crosspoint switch. In embodiments, the method includes increasing input oversampling rates with at least one delta-sigma analog-to-digital converter to reduce sampling rate outputs and to minimize anti-aliasing filter requirements. In embodiments, the distributed CPLD chips are each dedicated to the data bus for logic control of the multiple multiplexing units and the multiple data acquisition units and each include a high-frequency crystal clock reference divided by at least one of the distributed CPLD chips for at least one delta-sigma analog-to-digital converter to achieve lower sampling rates without digital resampling. In embodiments, the method includes obtaining long blocks of data at a single relatively high-sampling rate with the local data collection system as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units and each data acquisition unit has an onboard card set that stores calibration information and maintenance history of a data acquisition unit in which the onboard card set is located.

In embodiments, the method includes planning data acquisition routes based on hierarchical templates associated with at least the first element in the first machine in the industrial environment. In embodiments, the local data collection system manages data collection bands that define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system creates data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the method includes controlling a GUI system of the local data collection system to manage the data collection bands. The GUI system includes an expert system diagnostic tool. In embodiments, the computing environment of the platform includes cloud-based, machine pattern analysis of state information from multiple sensors to provide anticipated state information for the industrial environment. In embodiments, the computing environment of the platform provides self-organization of data pools based on at least one of the utilization metrics and yield metrics. In embodiments, the computing environment of the platform includes a self-organized swarm of industrial data collectors. In embodiments, each of multiple inputs of the crosspoint switch is individually assignable to any of multiple outputs of the crosspoint switch.

Methods and systems described herein for industrial machine sensor data streaming, collection, processing, and storage may be configured to operate and integrate with existing data collection, processing and storage systems and may include a method for capturing a plurality of streams of sensed data from sensors deployed to monitor aspects of an industrial machine associated with at least one moving part of the machine; at least one of the streams contains a plurality of frequencies of data. The method may include identifying a subset of data in at least one of the plurality of streams that corresponds to data representing at least one predefined frequency. The at least one predefined frequency is represented by a set of data collected from alternate sensors deployed to monitor aspects of the industrial machine associated with the at least one moving part of the machine. The method may further include processing the identified data with a data processing facility that processes the identified data with an algorithm configured to be applied to the set of data collected from alternate sensors. Lastly, the method may include storing the at least one of the streams of data, the identified subset of data, and a result of processing the identified data in an electronic data set.

Methods and systems described herein for industrial machine sensor data streaming, collection, processing, and storage may be configured to operate and integrate with existing data collection, processing, and storage systems and may include a method for applying data captured from sensors deployed to monitor aspects of an industrial machine associated with at least one moving part of the machine. The data is captured with predefined lines of resolution covering a predefined frequency range and is sent to a frequency matching facility that identifies a subset of data streamed from other sensors deployed to monitor aspects of the industrial machine associated with at least one moving part of the machine. The streamed data includes a plurality of lines of resolution and frequency ranges. The subset of data identified corresponds to the lines of resolution and predefined frequency range. This method may include storing the subset of data in an electronic data record in a format that corresponds to a format of the data captured with predefined lines of resolution and signaling to a data processing facility the presence of the stored subset of data. This method may, optionally, include processing the subset of data with at least one set of algorithms, models and pattern recognizers that corresponds to algorithms, models and pattern recognizers associated with processing the data captured with predefined lines of resolution covering a predefined frequency range.

Methods and systems described herein for industrial machine sensor data streaming, collection, processing, and storage may be configured to operate and integrate with existing data collection, processing and storage systems and may include a method for identifying a subset of streamed sensor data, the sensor data captured from sensors deployed to monitor aspects of an industrial machine associated with at least one moving part of the machine, the subset of streamed sensor data at predefined lines of resolution for a predefined frequency range, and establishing a first logical route for communicating electronically between a first computing facility performing the identifying and a second computing facility, wherein identified subset of the streamed sensor data is communicated exclusively over the established first logical route when communicating the subset of streamed sensor data from the first facility to the second facility. This method may further include establishing a second logical route for communicating electronically between the first computing facility and the second computing facility for at least one portion of the streamed sensor data that is not the identified subset. Additionally, this method may further include establishing a third logical route for communicating electronically between the first computing facility and the second computing facility for at least one portion of the streamed sensor data that includes the identified subset and at least one other portion of the data not represented by the identified subset.

Methods and systems described herein for industrial machine sensor data streaming, collection, processing, and storage may be configured to operate and integrate with existing data collection, processing and storage systems and may include a first data sensing and processing system that captures first data from a first set of sensors deployed to monitor aspects of an industrial machine associated with at least one moving part of the machine, the first data covering a set of lines of resolution and a frequency range. This system may include a second data sensing and processing system that captures and streams a second set of data from a second set of sensors deployed to monitor aspects of the industrial machine associated with at least one moving part of the machine, the second data covering a plurality of lines of resolution that includes the set of lines of resolution and a plurality of frequencies that includes the frequency range. The system may enable selecting a portion of the second data that corresponds to the set of lines of resolution and the frequency range of the first data, and processing the selected portion of the second data with the first data sensing and processing system.

Methods and systems described herein for industrial machine sensor data streaming, collection, processing, and storage may be configured to operate and integrate with existing data collection, processing and storage systems and may include a method for automatically processing a portion of a stream of sensed data. The sensed data is received from a first set of sensors deployed to monitor aspects of an industrial machine associated with at least one moving part of the machine.

The sensed data is in response to an electronic data structure that facilitates extracting a subset of the stream of sensed data that corresponds to a set of sensed data received from a second set of sensors deployed to monitor the aspects of the industrial machine associated with the at least one moving part of the machine. The set of sensed data is constrained to a frequency range. The stream of sensed data includes a range of frequencies that exceeds the frequency range of the set of sensed data, the processing comprising executing an algorithm on a portion of the stream of sensed data that is constrained to the frequency range of the set of sensed data, the algorithm configured to process the set of sensed data.

Methods and systems described herein for industrial machine sensor data streaming, collection, processing, and storage may be configured to operate and integrate with existing data collection, processing and storage systems and may include a method for receiving first data from sensors deployed to monitor aspects of an industrial machine associated with at least one moving part of the machine. This method may further include detecting at least one of a frequency range and lines of resolution represented by the first data; receiving a stream of data from sensors deployed to monitor the aspects of the industrial machine associated with the at least one moving part of the machine. The stream of data includes: (1) a plurality of frequency ranges and a plurality of lines of resolution that exceeds the frequency range and the lines of resolution represented by the first data; (2) a set of data extracted from the stream of data that corresponds to at least one of the frequency range and the lines of resolution represented by the first data; and (3) the extracted set of data which is processed with a data processing algorithm that is configured to process data within the frequency range and within the lines of resolution of the first data.

In embodiments, a system for data collection in an industrial environment may comprise a multi-sensor acquisition component, the multi-sensor acquisition component comprising a plurality of inputs and a plurality of outputs; a plurality of sensors operatively coupled to at least one of a plurality of components of an industrial process, and each communicatively coupled to at least one of the plurality of inputs of the multi-sensor acquisition component; a sensor data storage profile circuit structured to determine a data storage profile, the data storage profile comprising a data storage plan for the plurality of sensor data values; wherein the multi-sensor acquisition component is responsive to the data storage profile to selectively couple at least one of the plurality of inputs to at least one of the plurality of outputs; a sensor communication circuit communicatively coupled to the plurality of outputs of the multi-sensor acquisition component, and structured to interpret the plurality of sensor data values; a sensor data storage implementation circuit structured to store at least a first portion of the plurality of sensor data values in response to the data storage profile; a data analysis circuit structured to determine a data quality parameter in response to the plurality of sensor data values; and a data response circuit structured to adjust the data storage profile in response to the data quality parameter. **In** embodiments, the data storage profile may further comprise at least one of: a storage location for the at least one of the first portion of the plurality of sensor data values; a time data storage trajectory comprising a plurality of time values corresponding to a plurality of data storage locations over which the at least one of the first portion of the plurality of sensor data values is to be stored; a time domain distribution over which the at least one of the first portion of the plurality of sensor data values is to be stored; and location data storage trajectory comprising the plurality of data storage locations over which the at least one of the first portion of the plurality of sensor data values is to be stored. The sensor data storage implementation circuit may be further structured to store calibration data for at least one of the plurality of input sensors, and wherein the data response circuit is further configured to calibrate the at least one of the plurality of input sensors in response to the data quality parameter and the stored calibration data. An expert system circuit may be included and structured to self-organize, based on at least one parameter of the group of parameters comprising: utilization, yield, sensors co-located on a common piece of equipment, and sensors co-located on distinct pieces of equipment having common properties, at least one of the plurality of sensor data values or the data storage profile, the expert system circuit further structured to identify changes to the data storage profile that improve the data quality parameter, and wherein the data response circuit is further structured to the identified changes by the expert system circuit. The plurality of input sensors may include a plurality of mobile data collector units; an expert system circuit structured to self-organize the plurality of mobile data collector units using a swarm optimization algorithm; and a policy automation engine circuit structured to access a plurality of policies, the plurality of policies comprising rules and protocols related to at least one of: interconnectivity between the plurality of mobile data collector units, interconnectivity between at least one of the plurality of mobile data collector units and the sensor communication circuit. A data marketplace circuit may be included and structured to access a data marketplace and obtain at least one external sensor data value from the data marketplace, the external sensor data value comprising a sensor data value from an offset industrial production process; and wherein the data marketplace circuit is further structured to store at least a second portion of the plurality of sensor data values on the data marketplace. The plurality of policies may include rules and protocols related to sensor data values stored on the data marketplace. The sensor data storage implementation circuit may be further structured to store a distributed ledger, wherein the distributed ledger stores at least one of: a transaction associated with the data marketplace, and a subset of the sensor data values. An expert system circuit may be included and structured to identify improvements to at least one of: the plurality of input sensors, a component of the industrial process, and a flow value for the industrial process, and wherein the expert system circuit comprises at least one of a group of learning techniques. The data analysis circuit may be further structured to isolate vibration noise of one of the plurality of components to obtain a characteristic vibration fingerprint of the process component.

In embodiments, a method for data collection in an industrial environment may comprise interpreting a plurality of sensor data values from a plurality of input sensors each operatively coupled to at least one of a plurality of components of an industrial process; determining a data storage profile, the data storage profile comprising a data storage plan for the plurality of sensor data values; selectively couple at least one of a plurality of inputs of a multi-sensor acquisition component to at least one of a plurality of outputs of the multi-sensor acquisition component in response to the data storage profile, wherein the each of the plurality of input sensors are communicatively coupled to at least one of the plurality of inputs of the multi-sensor acquisition component; interrogating at least a portion of the plurality of sensor data values from the plurality of outputs of the multi-sensor acquisition component according to a data collection routine corresponding to each of the plurality of input sensors; storing at least a first portion of the plurality of sensor data values in response to the data storage profile; and determining a data quality parameter, and adjusting the data storage profile in response to the data quality parameter. In embodiments, the method may include calibrating at least one of the plurality of input sensors in response to the data quality parameter and stored calibration data. An expert system may operate to self-organize data collection from the plurality of input sensors, wherein the self-organizing is based on at least one parameter including: utilization of sensor throughput, utilization of network throughput, utilization of at least one of the plurality of components, a yield of the industrial process, sensors co-located on a common piece of equipment, and sensors co-located on distinct pieces of equipment having common properties. The expert system may operate to identify changes to the data collection that improve the data quality parameter. The self-organized data collection may include the data storage profile. The self-organized data collection may include a data collection routine for at least one of the plurality of input sensors, wherein the data collection routine comprises at least one of: a sensor range, a sensor scaling, a sensor sampling frequency, a data storage sampling frequency for a sensor, a sensor activation value, and a sensor fusion instruction.

In embodiments, an apparatus for data collection in an industrial environment may comprise a sensor data storage profile circuit structured to determine a data storage profile, the data storage profile comprising a data storage plan for a plurality of sensor data values corresponding to components of an industrial process; a sensor communication circuit communicatively coupled to a plurality of outputs of a multi-sensor acquisition component communicatively coupled to a plurality of input sensors, the plurality of input sensors configured to provide the plurality of sensor data values, the sensor communication circuit structured to interpret the plurality of sensor data values according to a data collection routine; a sensor data storage implementation circuit structured to store at least a first portion of the plurality of sensor data values in response to the data storage profile; a data analysis circuit structured to determine a data quality parameter in response to the plurality of sensor data values; and a data response circuit structured to adjust the data storage profile in response to the data quality parameter. In embodiments, the plurality of input sensors may include a plurality of mobile data collector units; an expert system circuit structured to self-organize the plurality of mobile data collector units using a swarm optimization algorithm; and a policy automation engine circuit structured to access a plurality of policies, the plurality of policies comprising rules and protocols related to at least one of: interconnectivity between the plurality of mobile data collector units, interconnectivity between at least one of the plurality of mobile data collector units and the sensor communication circuit. A data marketplace circuit may be included and structured to access a data marketplace and obtain at least one external sensor data value from the data marketplace, the external sensor data value comprising a sensor data value from an offset industrial production process, wherein the data marketplace circuit is further structured to store at least a second portion of the plurality of sensor data values on the data marketplace. The plurality of policies may include rules and protocols related to sensor data values stored on the data marketplace. The plurality of policies further comprise rules and protocols related to external sensor data values available from the data marketplace. The sensor data storage implementation circuit may be structured to store a distributed ledger, wherein the distributed ledger stores at least one of: a transaction associated with the data marketplace, and a subset of the sensor data values.

Methods and systems are disclosed herein for continuous ultrasonic monitoring, including providing continuous ultrasonic monitoring of rotating elements and bearings of an energy production facility; for cloud-based systems including machine pattern recognition based on the fusion of remote, analog industrial sensors or machine pattern analysis of state information from multiple analog industrial sensors to provide anticipated state information for an industrial system; for on-device sensor fusion and data storage for industrial IoT devices, including on-device sensor fusion and data storage for an Industrial IoT device, where data from multiple sensors are multiplexed at the device for storage of a fused data stream; and for self-organizing systems including a self-organizing data marketplace for industrial IoT data, including a self-organizing data marketplace for industrial IoT data, where available data elements are organized in the marketplace for consumption by consumers based on training a self-organizing facility with a training set and feedback from measures of marketplace success, for self-organizing data pools, including self-organization of data pools based on utilization and/or yield metrics, including utilization and/or yield metrics that are tracked for a plurality of data pools, a self-organized swarm of industrial data collectors, including a self-organizing swarm of industrial data collectors that organize among themselves to optimize data collection based on the capabilities and conditions of the members of the swarm, a self-organizing collector, including a self-organizing, multi-sensor data collector that can optimize data collection, power and/or yield based on conditions in its environment, a self-organizing storage for a multi-sensor data collector, including self-organizing storage for a multi-sensor data collector for industrial sensor data, a self-organizing network coding for a multi-sensor data network, including self-organizing network coding for a data network that transports data from multiple sensors in an industrial data collection environment.

Methods and systems are disclosed herein for training artificial intelligence ("AI") models based on industry-specific feedback, including training an AI model based on industry-specific feedback that reflects a measure of utilization, yield, or impact, where the AI model operates on sensor data from an industrial environment; for an industrial IoT distributed ledger, including a distributed ledger supporting the tracking of transactions executed in an automated data marketplace for industrial IoT data; for a network-sensitive collector, including a network condition-sensitive, self-organizing, multi-sensor data collector that can optimize based on bandwidth, quality of service, pricing, and/or other network conditions; for a remotely organized universal data collector that can power up and down sensor interfaces based on need and/or conditions identified in an industrial data collection environment; and for a haptic or multi-sensory user interface, including a wearable haptic or multi-sensory user interface for an industrial sensor data collector, with vibration, heat, electrical, and/or sound outputs.

Methods and systems are disclosed herein for a presentation layer for augmented reality and virtual reality (AR/VR) industrial glasses, where heat map elements are presented based on patterns and/or parameters in collected data; and for condition-sensitive, self-organized tuning of AR/VR interfaces based on feedback metrics and/or training in industrial environments.

In embodiments, a system for data collection, processing, and utilization of signals from at least a first element in a first machine in an industrial environment includes a platform including a computing environment connected to a local data collection system having at least a first sensor signal and a second sensor signal obtained from at least the first machine in the industrial environment. The system includes a first sensor in the local data collection system configured to be connected to the first machine and a second sensor in the local data collection system. The system further includes a crosspoint switch in the local data collection system having multiple inputs and multiple outputs including a first input connected to the first sensor and a second input connected to the second sensor. Throughout the present disclosure, wherever a crosspoint switch, multiplexer (MUX) device, or other multiple-input multiple-output data collection or communication device is described, any multi-sensor acquisition device is also contemplated herein. In certain embodiments, a multi-sensor acquisition device includes one or more channels configured for, or compatible with, an analog sensor input. The multiple outputs include a first output and second output configured to be switchable between a condition in which the first output is configured to switch between delivery of the first sensor signal and the second sensor signal and a condition in which there is simultaneous delivery of the first sensor signal from the first output and the second sensor signal from the second output. Each of multiple inputs is configured to be individually assigned to any of the multiple outputs, or combined in any subsets of the inputs to the outputs. Unassigned outputs are configured to be switched off, for example by producing a high-impedance state.

In embodiments, the first sensor signal and the second sensor signal are continuous vibration data about the industrial environment. In embodiments, the second sensor in the local data collection system is configured to be connected to the first machine. In embodiments, the second sensor in the local data collection system is configured to be connected to a second machine in the industrial environment. In embodiments, the computing environment of the platform is configured to compare relative phases of the first and second sensor signals. In embodiments, the first sensor is a single-axis sensor and the second sensor is a three-axis sensor. In embodiments, at least one of the multiple inputs of the crosspoint switch includes internet protocol, front-end signal conditioning, for improved signal-to-noise ratio. In embodiments, the crosspoint switch includes a third input that is configured with a continuously monitored alarm having a pre-determined trigger condition when the third input is unassigned to or undetected at any of the multiple outputs.

In embodiments, the local data collection system includes multiple multiplexing units and multiple data acquisition units receiving multiple data streams from multiple machines in the industrial environment. In embodiments, the local data collection system includes distributed complex programmable hardware device ("CPLD") chips each dedicated to a data bus for logic control of the multiple multiplexing units and the multiple data acquisition units that receive the multiple data streams from the multiple machines in the industrial environment. In embodiments, the local data collection system is configured to provide high-amperage input capability using solid state relays. In embodiments, the local data collection system is configured to power-down at least one of an analog sensor channel and a component board.

In embodiments, the local data collection system includes a phase-lock loop bandpass tracking filter configured to obtain slow-speed revolutions per minute ("RPMs") and phase information. In embodiments, the local data collection system is configured to digitally derive phase using on-board timers relative to at least one trigger channel and at least one of the multiple inputs. In embodiments, the local data collection system includes a peak-detector configured to autoscale using a separate analog-to-digital converter for peak detection. In embodiments, the local data collection system is configured to route at least one trigger channel that is raw and buffered into at least one of the multiple inputs. In embodiments, the local data collection system includes at least one delta-sigma analog-to-digital converter that is configured to increase input oversampling rates to reduce sampling rate outputs and to minimize anti-aliasing filter requirements. In embodiments, the distributed CPLD chips each dedicated to the data bus for logic control of the multiple multiplexing units and the multiple data acquisition units includes as high-frequency crystal clock reference configured to be divided by at least one of the distributed CPLD chips for at least one delta-sigma analog-to-digital converter to achieve lower sampling rates without digital resampling.

In embodiments, the local data collection system is configured to obtain long blocks of data at a single relatively high-sampling rate as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units each having an onboard card set configured to store calibration information and maintenance history of a data acquisition unit in which the onboard card set is located. In embodiments, the local data collection system is configured to plan data acquisition routes based on hierarchical templates.

In embodiments, the local data collection system is configured to manage data collection bands. In embodiments, the data collection bands define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system is configured to create data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

**In** embodiments, the local data collection system includes a graphical user interface ("GUI") system configured to manage the data collection bands. In embodiments, the GUI system includes an expert system diagnostic tool. In embodiments, the platform includes cloud-based, machine pattern analysis of state information from multiple sensors to provide anticipated state information for the industrial environment. In embodiments, the platform is configured to provide self-organization of data pools based on at least one of the utilization metrics and yield metrics. In embodiments, the platform includes a self-organized swarm of industrial data collectors. In embodiments, the local data collection system includes a wearable haptic user interface for an industrial sensor data collector with at least one of vibration, heat, electrical, and sound outputs.

**In** embodiments, multiple inputs of the crosspoint switch include a third input connected to the second sensor and a fourth input connected to the second sensor. The first sensor signal is from a single-axis sensor at an unchanging location associated with the first machine. In embodiments, the second sensor is a three-axis sensor. In embodiments, the local data collection system is configured to record gap-free digital waveform data simultaneously from at least the first input, the second input, the third input, and the fourth input. In embodiments, the platform is configured to determine a change in relative phase based on the simultaneously recorded gap-free digital waveform data. In embodiments, the second sensor is configured to be movable to a plurality of positions associated with the first machine while obtaining the simultaneously recorded gap-free waveform data. In embodiments, multiple outputs of the crosspoint switch include a third output and fourth output. The second, third, and fourth outputs are assigned together to a sequence of tri-axial sensors each located at different positions associated with the machine. In embodiments, the platform is configured to determine an operating deflection shape based on the change in relative phase and the simultaneously recorded gap-free digital waveform data.

**In** embodiments, the unchanging location is a position associated with the rotating shaft of the first machine. In embodiments, tri-axial sensors in the sequence of the tri-axial sensors are each located at different positions on the first machine but are each associated with different bearings in the machine. In embodiments, tri-axial sensors in the sequence of the tri-axial sensors are each located at similar positions associated with similar bearings but are each associated with different machines. In embodiments, the local data collection system is configured to obtain the simultaneously recorded gap-free digital waveform data from the first machine while the first machine and a second machine are both in operation. In embodiments, the local data collection system is configured to characterize a contribution from the first machine and the second machine in the simultaneously recorded gap-free digital waveform data from the first machine. In embodiments, the simultaneously recorded gap-free digital waveform data has a duration that is in excess of one minute.

**In** embodiments, a method of monitoring a machine having at least one shaft supported by a set of bearings includes monitoring a first data channel assigned to a single-axis sensor at an unchanging location associated with the machine. The method includes monitoring second, third, and fourth data channels each assigned to an axis of a three-axis sensor. The method includes recording gap-free digital waveform data simultaneously from all of the data channels while the machine is in operation and determining a change in relative phase based on the digital waveform data.

**In** embodiments, the tri-axial sensor is located at a plurality of positions associated with the machine while obtaining the digital waveform. In embodiments, the second, third, and fourth channels are assigned together to a sequence of tri-axial sensors each located at different positions associated with the machine. In embodiments, the data is received from all of the sensors simultaneously. In embodiments, the method includes determining an operating deflection shape based on the change in relative phase information and the waveform data. In embodiments, the unchanging location is a position associated with the shaft of the machine. In embodiments, the tri-axial sensors in the sequence of the tri-axial sensors are each located at different positions and are each associated with different bearings in the machine. In embodiments, the unchanging location is a position associated with the shaft of the machine. The tri-axial sensors in the sequence of the tri-axial sensors are each located at different positions and are each associated with different bearings that support the shaft in the machine.

**In** embodiments, the method includes monitoring the first data channel assigned to the single-axis sensor at an unchanging location located on a second machine. The method includes monitoring the second, the third, and the fourth data channels, each assigned to the axis of a three-axis sensor that is located at the position associated with the second machine. The method also includes recording gap-free digital waveform data simultaneously from all of the data channels from the second machine while both of the machines are in operation. In embodiments, the method includes characterizing the contribution from each of the machines in the gap-free digital waveform data simultaneously from the second machine.

In embodiments, a method for data collection, processing, and utilization of signals with a platform monitoring at least a first element in a first machine in an industrial environment includes obtaining, automatically with a computing environment, at least a first sensor signal and a second sensor signal with a local data collection system that monitors at least the first machine. The method includes connecting a first input of a crosspoint switch of the local data collection system to a first sensor and a second input of the crosspoint switch to a second sensor in the local data collection system. The method includes switching between a condition in which a first output of the crosspoint switch alternates between delivery of at least the first sensor signal and the second sensor signal and a condition in which there is simultaneous delivery of the first sensor signal from the first output and the second sensor signal from a second output of the crosspoint switch. The method also includes switching off unassigned outputs of the crosspoint switch into a high-impedance state.

In embodiments, the first sensor signal and the second sensor signal are continuous vibration data from the industrial environment. In embodiments, the second sensor in the local data collection system is connected to the first machine. In embodiments, the second sensor in the local data collection system is connected to a second machine in the industrial environment. In embodiments, the method includes comparing, automatically with the computing environment, relative phases of the first and second sensor signals. In embodiments, the first sensor is a single-axis sensor and the second sensor is a three-axis sensor. In embodiments, at least the first input of the crosspoint switch includes internet protocol front-end signal conditioning for improved signal-to-noise ratio.

In embodiments, the method includes continuously monitoring at least a third input of the crosspoint switch with an alarm having a pre-determined trigger condition when the third input is unassigned to any of multiple outputs on the crosspoint switch. In embodiments, the local data collection system includes multiple multiplexing units and multiple data acquisition units receiving multiple data streams from multiple machines in the industrial environment. In embodiments, the local data collection system includes distributed CPLD chips each dedicated to a data bus for logic control of the multiple multiplexing units and the multiple data acquisition units that receive the multiple data streams from the multiple machines in the industrial environment. In embodiments, the local data collection system provides high-amperage input capability using solid state relays.

In embodiments, the method includes powering down at least one of an analog sensor channel and a component board of the local data collection system. In embodiments, the local data collection system includes an external voltage reference for an A/D zero reference that is independent of the voltage of the first sensor and the second sensor. In embodiments, the local data collection system includes a phase-lock loop bandpass tracking filter that obtains slow-speed RPMs and phase information. In embodiments, the method includes digitally deriving phase using on-board timers relative to at least one trigger channel and at least one of multiple inputs on the crosspoint switch.

In embodiments, the method includes auto-scaling with a peak-detector using a separate analog-to-digital converter for peak detection. In embodiments, the method includes routing at least one trigger channel that is raw and buffered into at least one of multiple inputs on the crosspoint switch. In embodiments, the method includes increasing input oversampling rates with at least one delta-sigma analog-to-digital converter to reduce sampling rate outputs and to minimize anti-aliasing filter requirements. In embodiments, the distributed CPLD chips are each dedicated to the data bus for logic control of the multiple multiplexing units and the multiple data acquisition units and each include a high-frequency crystal clock reference divided by at least one of the distributed CPLD chips for at least one delta-sigma analog-to-digital converter to achieve lower sampling rates without digital resampling. In embodiments, the method includes obtaining long blocks of data at a single relatively high-sampling rate with the local data collection system as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units and each data acquisition unit has an onboard card set that stores calibration information and maintenance history of a data acquisition unit in which the onboard card set is located.

In embodiments, the method includes planning data acquisition routes based on hierarchical templates associated with at least the first element in the first machine in the industrial environment. In embodiments, the local data collection system manages data collection bands that define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system creates data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the method includes controlling a GUI system of the local data collection system to manage the data collection bands. The GUI system includes an expert system diagnostic tool. **In** embodiments, the computing environment of the platform includes cloud-based, machine pattern analysis of state information from multiple sensors to provide anticipated state information for the industrial environment. **In** embodiments, the computing environment of the platform provides self-organization of data pools based on at least one of the utilization metrics and yield metrics. **In** embodiments, the computing environment of the platform includes a self-organized swarm of industrial data collectors. **In** embodiments, each of multiple inputs of the crosspoint switch is individually assignable to any of multiple outputs of the crosspoint switch.

Methods and systems described herein for industrial machine sensor data streaming, collection, processing, and storage may be configured to operate and integrate with existing data collection, processing and storage systems and may include a method for capturing a plurality of streams of sensed data from sensors deployed to monitor aspects of an industrial machine associated with at least one moving part of the machine; at least one of the streams contains a plurality of frequencies of data. The method may include identifying a subset of data in at least one of the plurality of streams that corresponds to data representing at least one predefined frequency. The at least one predefined frequency is represented by a set of data collected from alternate sensors deployed to monitor aspects of the industrial machine associated with the at least one moving part of the machine. The method may further include processing the identified data with a data processing facility that processes the identified data with an algorithm configured to be applied to the set of data collected from alternate sensors. Lastly, the method may include storing the at least one of the streams of data, the identified subset of data, and a result of processing the identified data in an electronic data set.

Methods and systems described herein for industrial machine sensor data streaming, collection, processing, and storage may be configured to operate and integrate with existing data collection, processing, and storage systems and may include a method for applying data captured from sensors deployed to monitor aspects of an industrial machine associated with at least one moving part of the machine. The data is captured with predefined lines of resolution covering a predefined frequency range and is sent to a frequency matching facility that identifies a subset of data streamed from other sensors deployed to monitor aspects of the industrial machine associated with at least one moving part of the machine. The streamed data includes a plurality of lines of resolution and frequency ranges. The subset of data identified corresponds to the lines of resolution and predefined frequency range. This method may include storing the subset of data in an electronic data record in a format that corresponds to a format of the data captured with predefined lines of resolution and signaling to a data processing facility the presence of the stored subset of data. This method may, optionally, include processing the subset of data with at least one set of algorithms, models and pattern recognizers that corresponds to algorithms, models and pattern recognizers associated with processing the data captured with predefined lines of resolution covering a predefined frequency range.

Methods and systems described herein for industrial machine sensor data streaming, collection, processing, and storage may be configured to operate and integrate with existing data collection, processing and storage systems and may include a method for identifying a subset of streamed sensor data, the sensor data captured from sensors deployed to monitor aspects of an industrial machine associated with at least one moving part of the machine, the subset of streamed sensor data at predefined lines of resolution for a predefined frequency range, and establishing a first logical route for communicating electronically between a first computing facility performing the identifying and a second computing facility, wherein identified subset of the streamed sensor data is communicated exclusively over the established first logical route when communicating the subset of streamed sensor data from the first facility to the second facility. This method may further include establishing a second logical route for communicating electronically between the first computing facility and the second computing facility for at least one portion of the streamed sensor data that is not the identified subset. Additionally, this method may further include establishing a third logical route for communicating electronically between the first computing facility and the second computing facility for at least one portion of the streamed sensor data that includes the identified subset and at least one other portion of the data not represented by the identified subset.

Methods and systems described herein for industrial machine sensor data streaming, collection, processing, and storage may be configured to operate and integrate with existing data collection, processing and storage systems and may include a first data sensing and processing system that captures first data from a first set of sensors deployed to monitor aspects of an industrial machine associated with at least one moving part of the machine, the first data covering a set of lines of resolution and a frequency range. This system may include a second data sensing and processing system that captures and streams a second set of data from a second set of sensors deployed to monitor aspects of the industrial machine associated with at least one moving part of the machine, the second data covering a plurality of lines of resolution that includes the set of lines of resolution and a plurality of frequencies that includes the frequency range. The system may enable selecting a portion of the second data that corresponds to the set of lines of resolution and the frequency range of the first data, and processing the selected portion of the second data with the first data sensing and processing system.

Methods and systems described herein for industrial machine sensor data streaming, collection, processing, and storage may be configured to operate and integrate with existing data collection, processing and storage systems and may include a method for automatically processing a portion of a stream of sensed data. The sensed data is received from a first set of sensors deployed to monitor aspects of an industrial machine associated with at least one moving part of the machine. The sensed data is in response to an electronic data structure that facilitates extracting a subset of the stream of sensed data that corresponds to a set of sensed data received from a second set of sensors deployed to monitor the aspects of the industrial machine associated with the at least one moving part of the machine. The set of sensed data is constrained to a frequency range. The stream of sensed data includes a range of frequencies that exceeds the frequency range of the set of sensed data, the processing comprising executing an algorithm on a portion of the stream of sensed data that is constrained to the frequency range of the set of sensed data, the algorithm configured to process the set of sensed data.

Methods and systems described herein for industrial machine sensor data streaming, collection, processing, and storage may be configured to operate and integrate with existing data collection, processing and storage systems and may include a method for receiving first data from sensors deployed to monitor aspects of an industrial machine associated with at least one moving part of the machine. This method may further include detecting at least one of a frequency range and lines of resolution represented by the first data; receiving a stream of data from sensors deployed to monitor the aspects of the industrial machine associated with the at least one moving part of the machine. The stream of data includes: (1) a plurality of frequency ranges and a plurality of lines of resolution that exceeds the frequency range and the lines of resolution represented by the first data; (2) a set of data extracted from the stream of data that corresponds to at least one of the frequency range and the lines of resolution represented by the first data; and (3) the extracted set of data which is processed with a data processing algorithm that is configured to process data within the frequency range and within the lines of resolution of the first data.

The present disclosure describes a system for data in an industrial environment, the system according to one disclosed non-limiting embodiment of the present disclosure can include a multi-sensor acquisition component, the multi-sensor acquisition component including a plurality of inputs and a plurality of outputs, a plurality of sensors operatively coupled to at least one of a plurality of components of an industrial process, and each communicatively coupled to at least one of the plurality of inputs of the multi-sensor acquisition component, a sensor data storage profile circuit structured to determine a data storage profile, the data storage profile including a data storage plan for the plurality of sensor data values, wherein the multi-sensor acquisition component is responsive to the data storage profile to selectively couple at least one of the plurality of inputs to at least one of the plurality of outputs, a sensor communication circuit communicatively coupled to the plurality of outputs of the multi-sensor acquisition component, and structured to interpret the plurality of sensor data values, a sensor data storage implementation circuit structured to store at least a first portion of the plurality of sensor data values in response to the data storage profile, and a data marketplace circuit structured to store at least a second portion of the plurality of sensor data values on a data marketplace, wherein the data marketplace circuit is self-organized and automated.

In embodiments, the multi-sensor acquisition component includes at least one of a multiplexer, an analog switch, and a cross point switch.

In embodiments, the data marketplace circuit is further structured to obtain at least one external sensor data value from the data marketplace, the external sensor data value including a sensor data value from an offset industrial production process, the system further including a data analysis circuit structured to determine a state value in response to the first portion of the sensor data values and the external sensor data value, wherein the state value includes at least one of a sensor state, a process state, and a component state.

In embodiments, the sensor data storage implementation circuit is further structured to store at least one of calibration data or maintenance history for at least one of the plurality of input sensors, wherein the data analysis circuit is further structured to determine the state value in response to the at least one of the calibration data or maintenance history, and wherein the system further includes a data response circuit structured to adjust the detection package in response to the state value.

In embodiments, the data response circuit is further structured to adjust sensing operations of at least one of the plurality of input sensors in response to the state value by performing at least one operation on the at least one of the plurality input sensors selected from the operations consisting of adjusting a range value, adjusting a scaling value, adjusting a sampling frequency, adjusting a data storage sampling frequency, activating the input sensor, deactivating the input sensor, calibration, providing a maintenance alert, and adjusting a utilized sensor value, the utilized sensor value indicating which sensor from a plurality of available sensors is utilized in the detection package, and wherein the plurality of available sensors have at least one distinct sensing parameter selected from the sensing parameters consisting of input ranges, sensitivity values, locations, reliability values, duty cycle values, resolution values, and maintenance requirements.

**In** embodiments, the system further includes a data processing circuit structured to utilize at least one of the sensor data values to perform at least one of (i) analyze noise in a sensor data value, (ii) isolate a noise including a known noise associated with vibration of one of the plurality of process components to obtain a characteristic vibration fingerprint of the one of the plurality of process component, or (iii) remove a noise including a known noise from at least one of the sensor data values, wherein the noise includes at least of one of an ambient noise, a vibrational noise, a noise associated with a distinct process stage, a noise indicative of needed maintenance, or a noise associated with a local environment.

In embodiments, the system further includes a data processing circuit structured to utilize the external sensor data to determine a known noise, and to analyze noise in one of the sensor data values corresponding to a vibrating one of the plurality of components in response to the known noise, wherein the external sensor data corresponds to a sensor on a distinct machine similar having a similar operating characteristic to the vibrating one of the plurality of components.

In embodiments, the system further includes a complex programmable logic device (CPLD) chip structured to manage logic control of a data bus mapping connections between the plurality of inputs and the plurality of outputs of the multi-sensor acquisition component.

In embodiments, the system further includes an expert system circuit structured to identify improvements in a detection package including data collection routines corresponding to the plurality of input sensors, and a data response circuit structured to adjust the detection package in response to the identified improvements.

In embodiments, the system further includes an expert system circuit structured to identify improvements in an operating parameter of the industrial process, and a process response circuit structured to implement a process change in response to the identified improvements.

The present disclosure describes a method for data in an industrial environment, the method according to one disclosed non-limiting embodiment of the present disclosure can include interpreting a plurality of sensor data values from a plurality of sensors each operatively coupled to at least one of a plurality of components of an industrial process, determining a data storage profile, the data storage profile including a data storage plan for the plurality of sensor data values, selectively coupling at least one of a plurality of inputs of a multi-sensor acquisition component to at least one of a plurality of outputs of the multi-sensor acquisition component in response to the data storage profile, wherein the each of the plurality of sensors are communicatively coupled to at least one of the plurality of inputs of the multi-sensor acquisition component, interrogating at least a portion of the plurality of sensor data values from the plurality of outputs of the multi-sensor acquisition component according to a data collection routine corresponding to each of the plurality of input sensors, storing at least a first portion of the plurality of sensor data values in response to the data storage profile and determining a data quality parameter, and adjusting at least one of the data collection routines in response to the data quality parameter.

In embodiments, the method further includes storing at least a second portion of the sensor data values on a data marketplace, wherein the data marketplace is self-organized and automated.

In embodiments, the method further includes utilizing at least one of the sensor data values to analyze vibration corresponding to at least one of the plurality of components.

In embodiments, the analyzing vibration includes utilizing a known noise value.

In embodiments, the method further includes obtaining at least one external sensor data value from a data marketplace, the external sensor data value including a sensor data value from an offset industrial production process having a component with a similar vibration profile to the at least one of the plurality of components.

In embodiments, adjusting the data collection routine includes adjusting at least one of a range value, a scaling value, a sampling frequency, a data storage sampling frequency, activating one of the plurality of input sensors, deactivating one of the plurality of input sensors, calibrating an input sensor, providing a maintenance alert, fusing inputs from multiple sensors, and adjusting a utilized sensor value, the utilized sensor value indicating which sensor from a plurality of available sensors is utilized in the detection package, and wherein the plurality of available sensors have at least one distinct sensing parameter selected from the sensing parameters consisting of input ranges, sensitivity values, locations, reliability values, duty cycle values, resolution values, and maintenance requirements.

In embodiments, the method further includes operating an expert system to perform the adjusting the data collection routine.

The present disclosure describes an apparatus for data in an industrial environment, the apparatus according to one disclosed non-limiting embodiment of the present disclosure can include a sensor data storage profile circuit structured to determine a data storage profile, the data storage profile including a data storage plan for a plurality of sensor data values corresponding to components of an industrial process, a sensor communication circuit communicatively coupled to a plurality of outputs of a multi-sensor acquisition component communicatively coupled to a plurality of input sensors, the plurality of input sensors configured to provide the plurality of sensor data values, the sensor communication circuit structured to interpret the plurality of sensor data values according to a data collection routine, a sensor data storage implementation circuit structured to store at least a first portion of the plurality of sensor data values in response to the data storage profile, data analysis circuit structured to determine a data quality parameter in response to the plurality of sensor data values, and a data response circuit structured to adjust the data collection routine in response to the data quality parameter.

In embodiments, the apparatus further includes providing a data processing circuit structured to utilize at least one of the sensor data values to perform at least one of (i) analyze noise in a sensor data value, (ii) isolate a known noise associated with vibration of one of the plurality of process components to obtain a characteristic vibration fingerprint of the one of the plurality of process component, or (iii) remove the known noise from at least one of the plurality of sensor data values to facilitate analysis of the at least one of the plurality of sensor data values.

In embodiments, the apparatus further includes an expert system circuit structured to identify improvements in a detection package including data collection routines corresponding to the plurality of input sensors, and wherein the data response circuit is further structured to adjust the detection package in response to the identified improvements.

In embodiments, the apparatus further includes an expert system circuit structured to identify improvements in an operating parameter of the industrial process, and a process response circuit structured to implement a process change in response to the identified improvements.

Methods and systems are disclosed herein for continuous ultrasonic monitoring, including providing continuous ultrasonic monitoring of rotating elements and bearings of an energy production facility; for cloud-based systems including machine pattern recognition based on the fusion of remote, analog industrial sensors or machine pattern analysis of state information from multiple analog industrial sensors to provide anticipated state information for an industrial system; for on-device sensor fusion and data storage for industrial IoT devices, including on-device sensor fusion and data storage for an Industrial IoT device, where data from multiple sensors are multiplexed at the device for storage of a fused data stream; and for self-organizing systems including a self-organizing data marketplace for industrial IoT data, including a self-organizing data marketplace for industrial IoT data, where available data elements are organized in the marketplace for consumption by consumers based on training a self-organizing facility with a training set and feedback from measures of marketplace success, for self-organizing data pools, including self-organization of data pools based on utilization and/or yield metrics, including utilization and/or yield metrics that are tracked for a plurality of data pools, a self-organized swarm of industrial data collectors, including a self-organizing swarm of industrial data collectors that organize among themselves to optimize data collection based on the capabilities and conditions of the members of the swarm, a self-organizing collector, including a self-organizing, multi-sensor data collector that can optimize data collection, power and/or yield based on conditions in its environment, a self-organizing storage for a multi-sensor data collector, including self-organizing storage for a multi-sensor data collector for industrial sensor data, a self-organizing network coding for a multi-sensor data network, including self-organizing network coding for a data network that transports data from multiple sensors in an industrial data collection environment.

Methods and systems are disclosed herein for training artificial intelligence ("AI") models based on industry-specific feedback, including training an AI model based on industry-specific feedback that reflects a measure of utilization, yield, or impact, where the AI model operates on sensor data from an industrial environment; for an industrial IoT distributed ledger, including a distributed ledger supporting the tracking of transactions executed in an automated data marketplace for industrial IoT data; for a network-sensitive collector, including a network condition-sensitive, self-organizing, multi-sensor data collector that can optimize based on bandwidth, quality of service, pricing, and/or other network conditions; for a remotely organized universal data collector that can power up and down sensor interfaces based on need and/or conditions identified in an industrial data collection environment; and for a haptic or multi-sensory user interface, including a wearable haptic or multi-sensory user interface for an industrial sensor data collector, with vibration, heat, electrical, and/or sound outputs.

Methods and systems are disclosed herein for a presentation layer for augmented reality and virtual reality (AR/VR) industrial glasses, where heat map elements are presented based on patterns and/or parameters in collected data; and for condition-sensitive, self-organized tuning of AR/VR interfaces based on feedback metrics and/or training in industrial environments.

In embodiments, a system for data collection, processing, and utilization of signals from at least a first element in a first machine in an industrial environment includes a platform including a computing environment connected to a local data collection system having at least a first sensor signal and a second sensor signal obtained from at least the first machine in the industrial environment. The system includes a first sensor in the local data collection system configured to be connected to the first machine and a second sensor in the local data collection system. The system further includes a crosspoint switch in the local data collection system having multiple inputs and multiple outputs including a first input connected to the first sensor and a second input connected to the second sensor. Throughout the present disclosure, wherever a crosspoint switch, multiplexer (MUX) device, or other multiple-input multiple-output data collection or communication device is described, any multi-sensor acquisition device is also contemplated herein. In certain embodiments, a multi-sensor acquisition device includes one or more channels configured for, or compatible with, an analog sensor input. The multiple outputs include a first output and second output configured to be switchable between a condition in which the first output is configured to switch between delivery of the first sensor signal and the second sensor signal and a condition in which there is simultaneous delivery of the first sensor signal from the first output and the second sensor signal from the second output. Each of multiple inputs is configured to be individually assigned to any of the multiple outputs, or combined in any subsets of the inputs to the outputs. Unassigned outputs are configured to be switched off, for example by producing a high-impedance state.

In embodiments, the first sensor signal and the second sensor signal are continuous vibration data about the industrial environment. In embodiments, the second sensor in the local data collection system is configured to be connected to the first machine. In embodiments, the second sensor in the local data collection system is configured to be connected to a second machine in the industrial environment. In embodiments, the computing environment of the platform is configured to compare relative phases of the first and second sensor signals. In embodiments, the first sensor is a single-axis sensor and the second sensor is a three-axis sensor. In embodiments, at least one of the multiple inputs of the crosspoint switch includes internet protocol, front-end signal conditioning, for improved signal-to-noise ratio. In embodiments, the crosspoint switch includes a third input that is configured with a continuously monitored alarm having a pre-determined trigger condition when the third input is unassigned to or undetected at any of the multiple outputs.

In embodiments, the local data collection system includes multiple multiplexing units and multiple data acquisition units receiving multiple data streams from multiple machines in the industrial environment. In embodiments, the local data collection system includes distributed complex programmable hardware device ("CPLD") chips each dedicated to a data bus for logic control of the multiple multiplexing units and the multiple data acquisition units that receive the multiple data streams from the multiple machines in the industrial environment. In embodiments, the local data collection system is configured to provide high-amperage input capability using solid state relays. In embodiments, the local data collection system is configured to power-down at least one of an analog sensor channel and a component board.

In embodiments, the local data collection system includes a phase-lock loop bandpass tracking filter configured to obtain slow-speed revolutions per minute ("RPMs") and phase information. In embodiments, the local data collection system is configured to digitally derive phase using on-board timers relative to at least one trigger channel and at least one of the multiple inputs. In embodiments, the local data collection system includes a peak-detector configured to autoscale using a separate analog-to-digital converter for peak detection. In embodiments, the local data collection system is configured to route at least one trigger channel that is raw and buffered into at least one of the multiple inputs. In embodiments, the local data collection system includes at least one delta-sigma analog-to-digital converter that is configured to increase input oversampling rates to reduce sampling rate outputs and to minimize anti-aliasing filter requirements. In embodiments, the distributed CPLD chips each dedicated to the data bus for logic control of the multiple multiplexing units and the multiple data acquisition units includes as high-frequency crystal clock reference configured to be divided by at least one of the distributed CPLD chips for at least one delta-sigma analog-to-digital converter to achieve lower sampling rates without digital resampling.

In embodiments, the local data collection system is configured to obtain long blocks of data at a single relatively high-sampling rate as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units each having an onboard card set configured to store calibration information and maintenance history of a data acquisition unit in which the onboard card set is located. In embodiments, the local data collection system is configured to plan data acquisition routes based on hierarchical templates.

In embodiments, the local data collection system is configured to manage data collection bands. In embodiments, the data collection bands define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system is configured to create data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the local data collection system includes a graphical user interface ("GUI") system configured to manage the data collection bands. In embodiments, the GUI system includes an expert system diagnostic tool. In embodiments, the platform includes cloud-based, machine pattern analysis of state information from multiple sensors to provide anticipated state information for the industrial environment. In embodiments, the platform is configured to provide self-organization of data pools based on at least one of the utilization metrics and yield metrics. In embodiments, the platform includes a self-organized swarm of industrial data collectors. In embodiments, the local data collection system includes a wearable haptic user interface for an industrial sensor data collector with at least one of vibration, heat, electrical, and sound outputs.

In embodiments, multiple inputs of the crosspoint switch include a third input connected to the second sensor and a fourth input connected to the second sensor. The first sensor signal is from a single-axis sensor at an unchanging location associated with the first machine. In embodiments, the second sensor is a three-axis sensor. In embodiments, the local data collection system is configured to record gap-free digital waveform data simultaneously from at least the first input, the second input, the third input, and the fourth input. In embodiments, the platform is configured to determine a change in relative phase based on the simultaneously recorded gap-free digital waveform data. In embodiments, the second sensor is configured to be movable to a plurality of positions associated with the first machine while obtaining the simultaneously recorded gap-free digital waveform data. In embodiments, multiple outputs of the crosspoint switch include a third output and fourth output. The second, third, and fourth outputs are assigned together to a sequence of tri-axial sensors each located at different positions associated with the machine. In embodiments, the platform is configured to determine an operating deflection shape based on the change in relative phase and the simultaneously recorded gap-free digital waveform data.

In embodiments, the unchanging location is a position associated with the rotating shaft of the first machine. In embodiments, tri-axial sensors in the sequence of the tri-axial sensors are each located at different positions on the first machine but are each associated with different bearings in the machine. In embodiments, tri-axial sensors in the sequence of the tri-axial sensors are each located at similar positions associated with similar bearings but are each associated with different machines. In embodiments, the local data collection system is configured to obtain the simultaneously recorded gap-free digital waveform data from the first machine while the first machine and a second machine are both in operation. In embodiments, the local data collection system is configured to characterize a contribution from the first machine and the second machine in the simultaneously recorded gap-free digital waveform data from the first machine. In embodiments, the simultaneously recorded gap-free digital waveform data has a duration that is in excess of one minute.

In embodiments, a method of monitoring a machine having at least one shaft supported by a set of bearings includes monitoring a first data channel assigned to a single-axis sensor at an unchanging location associated with the machine. The method includes monitoring second, third, and fourth data channels each assigned to an axis of a three-axis sensor. The method includes recording gap-free digital waveform data simultaneously from all of the data channels while the machine is in operation and determining a change in relative phase based on the digital waveform data.

In embodiments, the tri-axial sensor is located at a plurality of positions associated with the machine while obtaining the digital waveform. In embodiments, the second, third, and fourth channels are assigned together to a sequence of tri-axial sensors each located at different positions associated with the machine. In embodiments, the data is received from all of the sensors simultaneously. In embodiments, the method includes determining an operating deflection shape based on the change in relative phase information and the waveform data. In embodiments, the unchanging location is a position associated with the shaft of the machine. In embodiments, the tri-axial sensors in the sequence of the tri-axial sensors are each located at different positions and are each associated with different bearings in the machine. In embodiments, the unchanging location is a position associated with the shaft of the machine. The tri-axial sensors in the sequence of the tri-axial sensors are each located at different positions and are each associated with different bearings that support the shaft in the machine.

In embodiments, the method includes monitoring the first data channel assigned to the single-axis sensor at an unchanging location located on a second machine. The method includes monitoring the second, the third, and the fourth data channels, each assigned to the axis of a three-axis sensor that is located at the position associated with the second machine. The method also includes recording gap-free digital waveform data simultaneously from all of the data channels from the second machine while both of the machines are in operation. In embodiments, the method includes characterizing the contribution from each of the machines in the gap-free digital waveform data simultaneously from the second machine.

In embodiments, a method for data collection, processing, and utilization of signals with a platform monitoring at least a first element in a first machine in an industrial environment includes obtaining, automatically with a computing environment, at least a first sensor signal and a second sensor signal with a local data collection system that monitors at least the first machine. The method includes connecting a first input of a crosspoint switch of the local data collection system to a first sensor and a second input of the crosspoint switch to a second sensor in the local data collection system. The method includes switching between a condition in which a first output of the crosspoint switch alternates between delivery of at least the first sensor signal and the second sensor signal and a condition in which there is simultaneous delivery of the first sensor signal from the first output and the second sensor signal from a second output of the crosspoint switch. The method also includes switching off unassigned outputs of the crosspoint switch into a high-impedance state.

In embodiments, the first sensor signal and the second sensor signal are continuous vibration data from the industrial environment. In embodiments, the second sensor in the local data collection system is connected to the first machine. In embodiments, the second sensor in the local data collection system is connected to a second machine in the industrial environment. In embodiments, the method includes comparing, automatically with the computing environment, relative phases of the first and second sensor signals. In embodiments, the first sensor is a single-axis sensor and the second sensor is a three-axis sensor. In embodiments, at least the first input of the crosspoint switch includes internet protocol front-end signal conditioning for improved signal-to-noise ratio.

In embodiments, the method includes continuously monitoring at least a third input of the crosspoint switch with an alarm having a pre-determined trigger condition when the third input is unassigned to any of multiple outputs on the crosspoint switch. In embodiments, the local data collection system includes multiple multiplexing units and multiple data acquisition units receiving multiple data streams from multiple machines in the industrial environment. In embodiments, the local data collection system includes distributed CPLD chips each dedicated to a data bus for logic control of the multiple multiplexing units and the multiple data acquisition units that receive the multiple data streams from the multiple machines in the industrial environment. In embodiments, the local data collection system provides high-amperage input capability using solid state relays.

In embodiments, the method includes powering down at least one of an analog sensor channel and a component board of the local data collection system. In embodiments, the local data collection system includes an external voltage reference for an A/D zero reference that is independent of the voltage of the first sensor and the second sensor. In embodiments, the local data collection system includes a phase-lock loop bandpass tracking filter that obtains slow-speed RPMs and phase information. In embodiments, the method includes digitally deriving phase using on-board timers relative to at least one trigger channel and at least one of multiple inputs on the crosspoint switch.

In embodiments, the method includes autoscaling with a peak-detector using a separate analog-to-digital converter for peak detection. In embodiments, the method includes routing at least one trigger channel that is raw and buffered into at least one of multiple inputs on the crosspoint switch. In embodiments, the method includes increasing input oversampling rates with at least one delta-sigma analog-to-digital converter to reduce sampling rate outputs and to minimize anti-aliasing filter requirements. In embodiments, the distributed CPLD chips are each dedicated to the data bus for logic control of the multiple multiplexing units and the multiple data acquisition units and each include a high-frequency crystal clock reference divided by at least one of the distributed CPLD chips for at least one delta-sigma analog-to-digital converter to achieve lower sampling rates without digital resampling. In embodiments, the method includes obtaining long blocks of data at a single relatively high-sampling rate with the local data collection system as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units and each data acquisition unit has an onboard card set that stores calibration information and maintenance history of a data acquisition unit in which the onboard card set is located.

In embodiments, the method includes planning data acquisition routes based on hierarchical templates associated with at least the first element in the first machine in the industrial environment. In embodiments, the local data collection system manages data collection bands that define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system creates data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the method includes controlling a GUI system of the local data collection system to manage the data collection bands. The GUI system includes an expert system diagnostic tool. In embodiments, the computing environment of the platform includes cloud-based, machine pattern analysis of state information from multiple sensors to provide anticipated state information for the industrial environment. In embodiments, the computing environment of the platform provides self-organization of data pools based on at least one of the utilization metrics and yield metrics. In embodiments, the computing environment of the platform includes a self-organized swarm of industrial data collectors. In embodiments, each of multiple inputs of the crosspoint switch is individually assignable to any of multiple outputs of the crosspoint switch.

Methods and systems described herein for industrial machine sensor data streaming, collection, processing, and storage may be configured to operate and integrate with existing data collection, processing and storage systems and may include a method for capturing a plurality of streams of sensed data from sensors deployed to monitor aspects of an industrial machine associated with at least one moving part of the machine; at least one of the streams contains a plurality of frequencies of data. The method may include identifying a subset of data in at least one of the plurality of streams that corresponds to data representing at least one predefined frequency. The at least one predefined frequency is represented by a set of data collected from alternate sensors deployed to monitor aspects of the industrial machine associated with the at least one moving part of the machine. The method may further include processing the identified data with a data processing facility that processes the identified data with an algorithm configured to be applied to the set of data collected from alternate sensors. Lastly, the method may include storing the at least one of the streams of data, the identified subset of data, and a result of processing the identified data in an electronic data set.

Methods and systems described herein for industrial machine sensor data streaming, collection, processing, and storage may be configured to operate and integrate with existing data collection, processing, and storage systems and may include a method for applying data captured from sensors deployed to monitor aspects of an industrial machine associated with at least one moving part of the machine. The data is captured with predefined lines of resolution covering a predefined frequency range and is sent to a frequency matching facility that identifies a subset of data streamed from other sensors deployed to monitor aspects of the industrial machine associated with at least one moving part of the machine. The streamed data includes a plurality of lines of resolution and frequency ranges. The subset of data identified corresponds to the lines of resolution and predefined frequency range. This method may include storing the subset of data in an electronic data record in a format that corresponds to a format of the data captured with predefined lines of resolution and signaling to a data processing facility the presence of the stored subset of data. This method may, optionally, include processing the subset of data with at least one set of algorithms, models and pattern recognizers that corresponds to algorithms, models and pattern recognizers associated with processing the data captured with predefined lines of resolution covering a predefined frequency range.

Methods and systems described herein for industrial machine sensor data streaming, collection, processing, and storage may be configured to operate and integrate with existing data collection, processing and storage systems and may include a method for identifying a subset of streamed sensor data, the sensor data captured from sensors deployed to monitor aspects of an industrial machine associated with at least one moving part of the machine, the subset of streamed sensor data at predefined lines of resolution for a predefined frequency range, and establishing a first logical route for communicating electronically between a first computing facility performing the identifying and a second computing facility, wherein identified subset of the streamed sensor data is communicated exclusively over the established first logical route when communicating the subset of streamed sensor data from the first facility to the second facility. This method may further include establishing a second logical route for communicating electronically between the first computing facility and the second computing facility for at least one portion of the streamed sensor data that is not the identified subset. Additionally, this method may further include establishing a third logical route for communicating electronically between the first computing facility and the second computing facility for at least one portion of the streamed sensor data that includes the identified subset and at least one other portion of the data not represented by the identified subset.

Methods and systems described herein for industrial machine sensor data streaming, collection, processing, and storage may be configured to operate and integrate with existing data collection, processing and storage systems and may include a first data sensing and processing system that captures first data from a first set of sensors deployed to monitor aspects of an industrial machine associated with at least one moving part of the machine, the first data covering a set of lines of resolution and a frequency range. This system may include a second data sensing and processing system that captures and streams a second set of data from a second set of sensors deployed to monitor aspects of the industrial machine associated with at least one moving part of the machine, the second data covering a plurality of lines of resolution that includes the set of lines of resolution and a plurality of frequencies that includes the frequency range. The system may enable selecting a portion of the second data that corresponds to the set of lines of resolution and the frequency range of the first data, and processing the selected portion of the second data with the first data sensing and processing system.

Methods and systems described herein for industrial machine sensor data streaming, collection, processing, and storage may be configured to operate and integrate with existing data collection, processing and storage systems and may include a method for automatically processing a portion of a stream of sensed data. The sensed data is received from a first set of sensors deployed to monitor aspects of an industrial machine associated with at least one moving part of the machine. The sensed data is in response to an electronic data structure that facilitates extracting a subset of the stream of sensed data that corresponds to a set of sensed data received from a second set of sensors deployed to monitor the aspects of the industrial machine associated with the at least one moving part of the machine. The set of sensed data is constrained to a frequency range. The stream of sensed data includes a range of frequencies that exceeds the frequency range of the set of sensed data, the processing comprising executing an algorithm on a portion of the stream of sensed data that is constrained to the frequency range of the set of sensed data, the algorithm configured to process the set of sensed data.

Methods and systems described herein for industrial machine sensor data streaming, collection, processing, and storage may be configured to operate and integrate with existing data collection, processing and storage systems and may include a method for receiving first data from sensors deployed to monitor aspects of an industrial machine associated with at least one moving part of the machine. This method may further include detecting at least one of a frequency range and lines of resolution represented by the first data; receiving a stream of data from sensors deployed to monitor the aspects of the industrial machine associated with the at least one moving part of the machine. The stream of data includes: (1) a plurality of frequency ranges and a plurality of lines of resolution that exceeds the frequency range and the lines of resolution represented by the first data; (2) a set of data extracted from the stream of data that corresponds to at least one of the frequency range and the lines of resolution represented by the first data; and (3) the extracted set of data which is processed with a data processing algorithm that is configured to process data within the frequency range and within the lines of resolution of the first data.

The present disclosure describes a monitoring system for data collection in an industrial environment, the system according to one disclosed non-limiting embodiment of the present disclosure can include a data collector communicatively coupled to a plurality of input channels and to a network infrastructure, wherein the data collector collects data from a subset of the plurality of input channels based on a selected data collection routine, a data storage structured to store a plurality of collector routes and collected data that correspond to the subset of the plurality of input channels, wherein the plurality of collector routes each includes a different data collection routine, a data acquisition circuit structured to interpret a plurality of detection values from the collected data, each of the plurality of detection values corresponding to at least one of the plurality of input channels, and a data analysis circuit structured to analyze the collected data and determine an aggregate rate of data being collected from the subset of the plurality of input channels, wherein if the aggregate rate exceeds a current bandwidth allocation rate associated with the network infrastructure, then the data analysis circuit requests an increase to the current bandwidth allocation rate from the network infrastructure.

In embodiments, the data storage has a data capacity allocation for the collected data, and the data capacity allocation is increased until the current bandwidth allocation rate is increased to meet the determined aggregate rate of data.

In embodiments, the data analysis circuit selectively eliminates collected data until the current bandwidth allocation rate is increased to meet the determined aggregate rate of data.

In embodiments, the collected data is eliminated to reduce the number of monitoring points co-located on an industrial machine.

In embodiments, the monitoring points are deactivated.

In embodiments, the collected data is eliminated based on a hierarchical template that establishes a hierarchy for the collected data.

In embodiments, collected data is eliminated based on a requirement for a data marketplace requirement to which the collected data is communicated.

In embodiments, collected data is eliminated based on a distributed ledger supporting a tracking of transactions executed in the data marketplace.

In embodiments, collected data is eliminated based on a self-organizing data pool associated with the data marketplace.

In embodiments, the data analysis circuit modifies a data collection parameter of the data collector to reduce the amount of data being collected from an individual input channel by reducing the sampling rate of the input channel or reducing the sampling resolution of the input channel.

In embodiments, the selected data collection routine is changed to a second data collection routine based on a hierarchical template for data collection until the current bandwidth allocation rate is increased to meet the determined aggregate rate of data.

In embodiments, the data collector is part of a self-organizing swarm of data collectors, and the data collection is redistributed to another data collector within the swarm of data collectors until the current bandwidth allocation rate is increased to meet the determined aggregate rate of data.

In embodiments, data from multiple input channels is multiplexed as a fused data stream until the current bandwidth allocation rate is increased to meet the determined aggregate rate of data.

In embodiments, the data analysis circuit utilizes a neural network to analyze the collected data to determine data for elimination until the current bandwidth allocation rate is increased to meet the determined aggregate rate of data.

The present disclosure describes a computer-implemented method for data collection in an industrial environment, the method according to one disclosed non-limiting embodiment of the present disclosure can include providing a data collector communicatively coupled to a plurality of input channels and to a network infrastructure, wherein the data collector collects data from a subset of the plurality of input channels based on a selected data collection routine, providing a data storage structured to store a plurality of collector routes and collected data that correspond to the subset of the plurality of input channels, wherein the plurality of collector routes each includes a different data collection routine, providing a data acquisition circuit structured to interpret a plurality of detection values from the collected data, each of the plurality of detection values corresponding to at least one of the plurality of input channels, and providing a data analysis circuit structured to analyze the collected data and determine an aggregate rate of data being collected from the subset of the plurality of input channels, wherein if the aggregate rate exceeds a current bandwidth allocation rate associated with the network infrastructure, then the data analysis circuit requests an increase to the current bandwidth allocation rate from the network infrastructure.

In embodiments, the data storage has a data capacity allocation for the collected data, and the data capacity allocation is increased until the current bandwidth allocation rate is increased to meet the determined aggregate rate of data.

In embodiments, the data analysis circuit selectively eliminates collected data until the current bandwidth allocation rate is increased to meet the determined aggregate rate of data.

The present disclosure describes an apparatus for monitoring data collection in an industrial environment, the apparatus according to one disclosed non-limiting embodiment of the present disclosure can include a data collector component communicatively coupled to a plurality of input channels and to a network infrastructure, wherein the data collector collects data from a subset of the plurality of input channels based on a selected data collection routine, a data storage component structured to store a plurality of collector routes and collected data that correspond to the subset of the plurality of input channels, wherein the plurality of collector routes each includes a different data collection routine, a data acquisition component structured to interpret a plurality of detection values from the collected data, each of the plurality of detection values corresponding to at least one of the plurality of input channels, and a data analysis component structured to analyze the collected data and determine an aggregate rate of data being collected from the subset of the plurality of input channels, wherein if the aggregate rate exceeds a current bandwidth allocation rate associated with the network infrastructure, then the data analysis circuit requests an increase to the current bandwidth allocation rate from the network infrastructure.

In embodiments, the data storage has a data capacity allocation for the collected data, and the data capacity allocation is increased until the current bandwidth allocation rate is increased to meet the determined aggregate rate of data.

In embodiments, the data analysis component selectively eliminates collected data until the current bandwidth allocation rate is increased to meet the determined aggregate rate of data.

Methods and systems are disclosed herein for continuous ultrasonic monitoring, including providing continuous ultrasonic monitoring of rotating elements and bearings of an energy production facility; for cloud-based systems including machine pattern recognition based on the fusion of remote, analog industrial sensors or machine pattern analysis of state information from multiple analog industrial sensors to provide anticipated state information for an industrial system; for on-device sensor fusion and data storage for industrial IoT devices, including on-device sensor fusion and data storage for an Industrial IoT device, where data from multiple sensors are multiplexed at the device for storage of a fused data stream; and for self-organizing systems including a self-organizing data marketplace for industrial IoT data, including a self-organizing data marketplace for industrial IoT data, where available data elements are organized in the marketplace for consumption by consumers based on training a self-organizing facility with a training set and feedback from measures of marketplace success, for self-organizing data pools, including self-organization of data pools based on utilization and/or yield metrics, including utilization and/or yield metrics that are tracked for a plurality of data pools, a self-organized swarm of industrial data collectors, including a self-organizing swarm of industrial data collectors that organize among themselves to optimize data collection based on the capabilities and conditions of the members of the swarm, a self-organizing collector, including a self-organizing, multi-sensor data collector that can optimize data collection, power and/or yield based on conditions in its environment, a self-organizing storage for a multi-sensor data collector, including self-organizing storage for a multi-sensor data collector for industrial sensor data, a self-organizing network coding for a multi-sensor data network, including self-organizing network coding for a data network that transports data from multiple sensors in an industrial data collection environment.

Methods and systems are disclosed herein for training artificial intelligence ("AI") models based on industry-specific feedback, including training an AI model based on industry-specific feedback that reflects a measure of utilization, yield, or impact, where the AI model operates on sensor data from an industrial environment; for an industrial IoT distributed ledger, including a distributed ledger supporting the tracking of transactions executed in an automated data marketplace for industrial IoT data; for a network-sensitive collector, including a network condition-sensitive, self-organizing, multi-sensor data collector that can optimize based on bandwidth, quality of service, pricing, and/or other network conditions; for a remotely organized universal data collector that can power up and down sensor interfaces based on need and/or conditions identified in an industrial data collection environment; and for a haptic or multi-sensory user interface, including a wearable haptic or multi-sensory user interface for an industrial sensor data collector, with vibration, heat, electrical, and/or sound outputs.

Methods and systems are disclosed herein for a presentation layer for augmented reality and virtual reality (AR/VR) industrial glasses, where heat map elements are presented based on patterns and/or parameters in collected data; and for condition-sensitive, self-organized tuning of AR/VR interfaces based on feedback metrics and/or training in industrial environments.

In embodiments, a system for data collection, processing, and utilization of signals from at least a first element in a first machine in an industrial environment includes a platform including a computing environment connected to a local data collection system having at least a first sensor signal and a second sensor signal obtained from at least the first machine in the industrial environment. The system includes a first sensor in the local data collection system configured to be connected to the first machine and a second sensor in the local data collection system. The system further includes a cross-point switch in the local data collection system having multiple inputs and multiple outputs including a first input connected to the first sensor and a second input connected to the second sensor. Throughout the present disclosure, wherever a crosspoint switch, multiplexer (MUX) device, or other multiple-input multiple-output data collection or communication device is described, any multi-sensor acquisition device is also contemplated herein. In certain embodiments, a multi-sensor acquisition device includes one or more channels configured for, or compatible with, an analog sensor input. The multiple outputs include a first output and second output configured to be switchable between a condition in which the first output is configured to switch between delivery of the first sensor signal and the second sensor signal and a condition in which there is simultaneous delivery of the first sensor signal from the first output and the second sensor signal from the second output. Each of multiple inputs is configured to be individually assigned to any of the multiple outputs, or combined in any subsets of the inputs to the outputs. Unassigned outputs are configured to be switched off, for example by producing a high-impedance state.

In embodiments, the first sensor signal and the second sensor signal are continuous vibration data about the industrial environment. In embodiments, the second sensor in the local data collection system is configured to be connected to the first machine. In embodiments, the second sensor in the local data collection system is configured to be connected to a second machine in the industrial environment. In embodiments, the computing environment of the platform is configured to compare relative phases of the first and second sensor signals. In embodiments, the first sensor is a single-axis sensor and the second sensor is a three-axis sensor. In embodiments, at least one of the multiple inputs of the crosspoint switch includes internet protocol, front-end signal conditioning, for improved signal-to-noise ratio. In embodiments, the crosspoint switch includes a third input that is configured with a continuously monitored alarm having a pre-determined trigger condition when the third input is unassigned to or undetected at any of the multiple outputs.

In embodiments, the local data collection system includes multiple multiplexing units and multiple data acquisition units receiving multiple data streams from multiple machines in the industrial environment. In embodiments, the local data collection system includes distributed complex programmable hardware device ("CPLD") chips each dedicated to a data bus for logic control of the multiple multiplexing units and the multiple data acquisition units that receive the multiple data streams from the multiple machines in the industrial environment. In embodiments, the local data collection system is configured to provide high-amperage input capability using solid state relays. In embodiments, the local data collection system is configured to power-down at least one of an analog sensor channel and a component board.

In embodiments, the local data collection system includes a phase-lock loop bandpass tracking filter configured to obtain slow-speed revolutions per minute ("RPMs") and phase information. In embodiments, the local data collection system is configured to digitally derive phase using on-board timers relative to at least one trigger channel and at least one of the multiple inputs. In embodiments, the local data collection system includes a peak-detector configured to autoscale using a separate analog-to-digital converter for peak detection. In embodiments, the local data collection system is configured to route at least one trigger channel that is raw and buffered into at least one of the multiple inputs. In embodiments, the local data collection system includes at least one delta-sigma analog-to-digital converter that is configured to increase input oversampling rates to reduce sampling rate outputs and to minimize anti-aliasing filter requirements. In embodiments, the distributed CPLD chips each dedicated to the data bus for logic control of the multiple multiplexing units and the multiple data acquisition units includes as high-frequency crystal clock reference configured to be divided by at least one of the distributed CPLD chips for at least one delta-sigma analog-to-digital converter to achieve lower sampling rates without digital resampling.

In embodiments, the local data collection system is configured to obtain long blocks of data at a single relatively high-sampling rate as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units each having an onboard card set configured to store calibration information and maintenance history of a data acquisition unit in which the onboard card set is located. In embodiments, the local data collection system is configured to plan data acquisition routes based on hierarchical templates.

In embodiments, the local data collection system is configured to manage data collection bands. In embodiments, the data collection bands define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system is configured to create data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the local data collection system includes a graphical user interface ("GUI") system configured to manage the data collection bands. In embodiments, the GUI system includes an expert system diagnostic tool. In embodiments, the platform includes cloud-based, machine pattern analysis of state information from multiple sensors to provide anticipated state information for the industrial environment. In embodiments, the platform is configured to provide self-organization of data pools based on at least one of the utilization metrics and yield metrics. In embodiments, the platform includes a self-organized swarm of industrial data collectors. In embodiments, the local data collection system includes a wearable haptic user interface for an industrial sensor data collector with at least one of vibration, heat, electrical, and sound outputs.

In embodiments, multiple inputs of the crosspoint switch include a third input connected to the second sensor and a fourth input connected to the second sensor. The first sensor signal is from a single-axis sensor at an unchanging location associated with the first machine. In embodiments, the second sensor is a three-axis sensor. In embodiments, the local data collection system is configured to record gap-free digital waveform data simultaneously from at least the first input, the second input, the third input, and the fourth input. In embodiments, the platform is configured to determine a change in relative phase based on the simultaneously recorded gap-free digital waveform data. In embodiments, the second sensor is configured to be movable to a plurality of positions associated with the first machine while obtaining the simultaneously recorded gap-free digital waveform data. In embodiments, multiple outputs of the crosspoint switch include a third output and fourth output. The second, third, and fourth outputs are assigned together to a sequence of tri-axial sensors each located at different positions associated with the machine. In embodiments, the platform is configured to determine an operating deflection shape based on the change in relative phase and the simultaneously recorded gap-free digital waveform data.

In embodiments, the unchanging location is a position associated with the rotating shaft of the first machine. In embodiments, tri-axial sensors in the sequence of the tri-axial sensors are each located at different positions on the first machine but are each associated with different bearings in the machine. In embodiments, tri-axial sensors in the sequence of the tri-axial sensors are each located at similar positions associated with similar bearings but are each associated with different machines. In embodiments, the local data collection system is configured to obtain the simultaneously recorded gap-free digital waveform data from the first machine while the first machine and a second machine are both in operation. In embodiments, the local data collection system is configured to characterize a contribution from the first machine and the second machine in the simultaneously recorded gap-free digital waveform data from the first machine. In embodiments, the simultaneously recorded gap-free digital waveform data has a duration that is in excess of one minute.

In embodiments, a method of monitoring a machine having at least one shaft supported by a set of bearings includes monitoring a first data channel assigned to a single-axis sensor at an unchanging location associated with the machine. The method includes monitoring second, third, and fourth data channels each assigned to an axis of a three-axis sensor. The method includes recording gap-free digital waveform data simultaneously from all of the data channels while the machine is in operation and determining a change in relative phase based on the digital waveform data.

In embodiments, the tri-axial sensor is located at a plurality of positions associated with the machine while obtaining the digital waveform. In embodiments, the second, third, and fourth channels are assigned together to a sequence of tri-axial sensors each located at different positions associated with the machine. In embodiments, the data is received from all of the sensors simultaneously. In embodiments, the method includes determining an operating deflection shape based on the change in relative phase information and the waveform data. In embodiments, the unchanging location is a position associated with the shaft of the machine. In embodiments, the tri-axial sensors in the sequence of the tri-axial sensors are each located at different positions and are each associated with different bearings in the machine. In embodiments, the unchanging location is a position associated with the shaft of the machine. The tri-axial sensors in the sequence of the tri-axial sensors are each located at different positions and are each associated with different bearings that support the shaft in the machine.

In embodiments, the method includes monitoring the first data channel assigned to the single-axis sensor at an unchanging location located on a second machine. The method includes monitoring the second, the third, and the fourth data channels, each assigned to the axis of a three-axis sensor that is located at the position associated with the second machine. The method also includes recording gap-free digital waveform data simultaneously from all of the data channels from the second machine while both of the machines are in operation. In embodiments, the method includes characterizing the contribution from each of the machines in the gap-free digital waveform data simultaneously from the second machine.

In embodiments, a method for data collection, processing, and utilization of signals with a platform monitoring at least a first element in a first machine in an industrial environment includes obtaining, automatically with a computing environment, at least a first sensor signal and a second sensor signal with a local data collection system that monitors at least the first machine. The method includes connecting a first input of a crosspoint switch of the local data collection system to a first sensor and a second input of the crosspoint switch to a second sensor in the local data collection system. The method includes switching between a condition in which a first output of the crosspoint switch alternates between delivery of at least the first sensor signal and the second sensor signal and a condition in which there is simultaneous delivery of the first sensor signal from the first output and the second sensor signal from a second output of the crosspoint switch. The method also includes switching off unassigned outputs of the crosspoint switch into a high-impedance state.

In embodiments, the first sensor signal and the second sensor signal are continuous vibration data from the industrial environment. In embodiments, the second sensor in the local data collection system is connected to the first machine. In embodiments, the second sensor in the local data collection system is connected to a second machine in the industrial environment. In embodiments, the method includes comparing, automatically with the computing environment, relative phases of the first and second sensor signals. In embodiments, the first sensor is a single-axis sensor and the second sensor is a three-axis sensor. In embodiments, at least the first input of the crosspoint switch includes internet protocol front-end signal conditioning for improved signal-to-noise ratio.

In embodiments, the method includes continuously monitoring at least a third input of the crosspoint switch with an alarm having a pre-determined trigger condition when the third input is unassigned to any of multiple outputs on the crosspoint switch. In embodiments, the local data collection system includes multiple multiplexing units and multiple data acquisition units receiving multiple data streams from multiple machines in the industrial environment. In embodiments, the local data collection system includes distributed CPLD chips each dedicated to a data bus for logic control of the multiple multiplexing units and the multiple data acquisition units that receive the multiple data streams from the multiple machines in the industrial environment. In embodiments, the local data collection system provides high-amperage input capability using solid state relays.

In embodiments, the method includes powering down at least one of an analog sensor channel and a component board of the local data collection system. In embodiments, the local data collection system includes an external voltage reference for an A/D zero reference that is independent of the voltage of the first sensor and the second sensor. In embodiments, the local data collection system includes a phase-lock loop bandpass tracking filter that obtains slow-speed RPMs and phase information. In embodiments, the method includes digitally deriving phase using on-board timers relative to at least one trigger channel and at least one of multiple inputs on the crosspoint switch.

In embodiments, the method includes auto-scaling with a peak-detector using a separate analog-to-digital converter for peak detection. In embodiments, the method includes routing at least one trigger channel that is raw and buffered into at least one of multiple inputs on the crosspoint switch. In embodiments, the method includes increasing input oversampling rates with at least one delta-sigma analog-to-digital converter to reduce sampling rate outputs and to minimize anti-aliasing filter requirements. In embodiments, the distributed CPLD chips are each dedicated to the data bus for logic control of the multiple multiplexing units and the multiple data acquisition units and each include a high-frequency crystal clock reference divided by at least one of the distributed CPLD chips for at least one delta-sigma analog-to-digital converter to achieve lower sampling rates without digital resampling. In embodiments, the method includes obtaining long blocks of data at a single relatively high-sampling rate with the local data collection system as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units and each data acquisition unit has an onboard card set that stores calibration information and maintenance history of a data acquisition unit in which the onboard card set is located.

In embodiments, the method includes planning data acquisition routes based on hierarchical templates associated with at least the first element in the first machine in the industrial environment. In embodiments, the local data collection system manages data collection bands that define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system creates data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the method includes controlling a GUI system of the local data collection system to manage the data collection bands. The GUI system includes an expert system diagnostic tool. In embodiments, the computing environment of the platform includes cloud-based, machine pattern analysis of state information from multiple sensors to provide anticipated state information for the industrial environment. In embodiments, the computing environment of the platform provides self-organization of data pools based on at least one of the utilization metrics and yield metrics. In embodiments, the computing environment of the platform includes a self-organized swarm of industrial data collectors. In embodiments, each of multiple inputs of the crosspoint switch is individually assignable to any of multiple outputs of the crosspoint switch.

Methods and systems described herein for industrial machine sensor data streaming, collection, processing, and storage may be configured to operate and integrate with existing data collection, processing and storage systems and may include a method for capturing a plurality of streams of sensed data from sensors deployed to monitor aspects of an industrial machine associated with at least one moving part of the machine; at least one of the streams contains a plurality of frequencies of data. The method may include identifying a subset of data in at least one of the plurality of streams that corresponds to data representing at least one predefined frequency. The at least one predefined frequency is represented by a set of data collected from alternate sensors deployed to monitor aspects of the industrial machine associated with the at least one moving part of the machine. The method may further include processing the identified data with a data processing facility that processes the identified data with an algorithm configured to be applied to the set of data collected from alternate sensors. Lastly, the method may include storing the at least one of the streams of data, the identified subset of data, and a result of processing the identified data in an electronic data set.

Methods and systems described herein for industrial machine sensor data streaming, collection, processing, and storage may be configured to operate and integrate with existing data collection, processing, and storage systems and may include a method for applying data captured from sensors deployed to monitor aspects of an industrial machine associated with at least one moving part of the machine. The data is captured with predefined lines of resolution covering a predefined frequency range and is sent to a frequency matching facility that identifies a subset of data streamed from other sensors deployed to monitor aspects of the industrial machine associated with at least one moving part of the machine. The streamed data includes a plurality of lines of resolution and frequency ranges. The subset of data identified corresponds to the lines of resolution and predefined frequency range. This method may include storing the subset of data in an electronic data record in a format that corresponds to a format of the data captured with predefined lines of resolution and signaling to a data processing facility the presence of the stored subset of data. This method may, optionally, include processing the subset of data with at least one set of algorithms, models and pattern recognizers that corresponds to algorithms, models and pattern recognizers associated with processing the data captured with predefined lines of resolution covering a predefined frequency range.

Methods and systems described herein for industrial machine sensor data streaming, collection, processing, and storage may be configured to operate and integrate with existing data collection, processing and storage systems and may include a method for identifying a subset of streamed sensor data, the sensor data captured from sensors deployed to monitor aspects of an industrial machine associated with at least one moving part of the machine, the subset of streamed sensor data at predefined lines of resolution for a predefined frequency range, and establishing a first logical route for communicating electronically between a first computing facility performing the identifying and a second computing facility, wherein identified subset of the streamed sensor data is communicated exclusively over the established first logical route when communicating the subset of streamed sensor data from the first facility to the second facility. This method may further include establishing a second logical route for communicating electronically between the first computing facility and the second computing facility for at least one portion of the streamed sensor data that is not the identified subset. Additionally, this method may further include establishing a third logical route for communicating electronically between the first computing facility and the second computing facility for at least one portion of the streamed sensor data that includes the identified subset and at least one other portion of the data not represented by the identified subset.

Methods and systems described herein for industrial machine sensor data streaming, collection, processing, and storage may be configured to operate and integrate with existing data collection, processing and storage systems and may include a first data sensing and processing system that captures first data from a first set of sensors deployed to monitor aspects of an industrial machine associated with at least one moving part of the machine, the first data covering a set of lines of resolution and a frequency range. This system may include a second data sensing and processing system that captures and streams a second set of data from a second set of sensors deployed to monitor aspects of the industrial machine associated with at least one moving part of the machine, the second data covering a plurality of lines of resolution that includes the set of lines of resolution and a plurality of frequencies that includes the frequency range. The system may enable selecting a portion of the second data that corresponds to the set of lines of resolution and the frequency range of the first data, and processing the selected portion of the second data with the first data sensing and processing system.

Methods and systems described herein for industrial machine sensor data streaming, collection, processing, and storage may be configured to operate and integrate with existing data collection, processing and storage systems and may include a method for automatically processing a portion of a stream of sensed data. The sensed data is received from a first set of sensors deployed to monitor aspects of an industrial machine associated with at least one moving part of the machine. The sensed data is in response to an electronic data structure that facilitates extracting a subset of the stream of sensed data that corresponds to a set of sensed data received from a second set of sensors deployed to monitor the aspects of the industrial machine associated with the at least one moving part of the machine. The set of sensed data is constrained to a frequency range. The stream of sensed data includes a range of frequencies that exceeds the frequency range of the set of sensed data, the processing comprising executing an algorithm on a portion of the stream of sensed data that is constrained to the frequency range of the set of sensed data, the algorithm configured to process the set of sensed data.

Methods and systems described herein for industrial machine sensor data streaming, collection, processing, and storage may be configured to operate and integrate with existing data collection, processing and storage systems and may include a method for receiving first data from sensors deployed to monitor aspects of an industrial machine associated with at least one moving part of the machine. This method may further include detecting at least one of a frequency range and lines of resolution represented by the first data; receiving a stream of data from sensors deployed to monitor the aspects of the industrial machine associated with the at least one moving part of the machine. The stream of data includes: (1) a plurality of frequency ranges and a plurality of lines of resolution that exceeds the frequency range and the lines of resolution represented by the first data; (2) a set of data extracted from the stream of data that corresponds to at least one of the frequency range and the lines of resolution represented by the first data; and (3) the extracted set of data which is processed with a data processing algorithm that is configured to process data within the frequency range and within the lines of resolution of the first data.

The present disclosure describes a monitoring system for data collection in an industrial environment, the system according to one disclosed non-limiting embodiment of the present disclosure can include a data collector communicatively coupled to a plurality of input channels and to a network infrastructure, wherein the data collector collects data from the plurality of input channels based on a selected data collection routine, a data storage structured to store a plurality of collector routes and collected data that correspond to the plurality of input channels, wherein the plurality of collector routes each includes a different data collection routine, a data acquisition circuit structured to interpret a plurality of detection values from the collected data, each of the plurality of detection values corresponding to at least one of the plurality of input channels, and a data analysis circuit structured to analyze the collected data and determine an aggregate rate of data being collected from the plurality of input channels, wherein if the aggregate rate exceeds a throughput parameter of the network infrastructure, then the data analysis circuit alters the data collection to reduce the amount of data collected.

In embodiments, the selected data collection routine is switched to a second collection routine to reduce the amount of data being collected.

In embodiments, a channel of the data collector is deactivated to reduce the amount of data being collected, wherein the channel is one of the plurality of input channels or an output channel.

In embodiments, the channel is deactivated by setting the channel into a high impedance state.

In embodiments, the channel is deactivated by switching out the channel through use of a cross-point switch having multiple inputs and multiple outputs including a first input connected to the first sensor and a second input connected to the second sensor.

In embodiments, the data collector is part of a self-organizing swarm of data collectors, and the data collection is altered by redistributing data collection to another data collector within the swarm of data collectors.

In embodiments, data from a first input channel is not collected from because it is related to a similar data type from a second input channel, wherein the first input channel measures a first parameter on a first industrial machine and the second input channel measures a second parameter on a second industrial machine, where the first and second industrial machines have similar operating characteristics.

In embodiments, the similar data type is identified by relating the first and second industrial machines through a stored vibration fingerprint from the first and second industrial machines.

In embodiments, the data analysis circuit alters the data collection by adjusting an auto-scaling value associated with data collection from one the plurality of input channels.

In embodiments, the data analysis circuit alters the data collection by switching between the collection of raw data and processed data.

In embodiments, the data analysis circuit alters the data collection by eliminating collected data based on a requirement for a data marketplace requirement to which the collected data is communicated.

In embodiments, the data analysis circuit analyzes the collected data with a neural network to identify how to alter the data collection.

In embodiments, the data analysis circuit alters the data collection by identifying multiple uses of a first collected data from one of the plurality of input channels and eliminating a second collected data from a second of the plurality of input channels.

In embodiments, the data analysis circuit modifies a data collection parameter of the data collector to reduce the amount of data being collected from an individual input channel by reducing the sampling rate of the input channel or reducing the sampling resolution of the input channel.

The present disclosure describes a computer-implemented method for data collection in an industrial environment, the method according to one disclosed non-limiting embodiment of the present disclosure can include providing a data collector communicatively coupled to a plurality of input channels and to a network infrastructure, wherein the data collector collects data from the plurality of input channels based on a selected data collection routine, providing a data storage structured to store a plurality of collector routes and collected data that correspond to the plurality of input channels, wherein the plurality of collector routes each includes a different data collection routine, providing a data acquisition circuit structured to interpret a plurality of detection values from the collected data, each of the plurality of detection values corresponding to at least one of the plurality of input channels, and providing a data analysis circuit structured to analyze the collected data and determine an aggregate rate of data being collected from the plurality of input channels, wherein if the aggregate rate exceeds a throughput parameter of the network infrastructure, then the data analysis circuit alters the data collection to reduce the amount of data collected.

In embodiments, the selected data collection routine is switched to a second collection routine to reduce the amount of data being collected.

In embodiments, a channel of the data collector is deactivated to reduce the amount of data being collected, wherein the channel is one of the plurality of input channels or an output channel.

The present disclosure describes an apparatus for monitoring data collection in an industrial environment, the apparatus according to one disclosed non-limiting embodiment of the present disclosure can include a data collector component communicatively coupled to a plurality of input channels and to a network infrastructure, wherein the data collector collects data from the plurality of input channels based on a selected data collection routine, a data storage component structured to store a plurality of collector routes and collected data that correspond to the plurality of input channels, wherein the plurality of collector routes each includes a different data collection routine, a data acquisition component structured to interpret a plurality of detection values from the collected data, each of the plurality of detection values corresponding to at least one of the plurality of input channels, and a data analysis component structured to analyze the collected data and determine an aggregate rate of data being collected from the plurality of input channels, wherein if the aggregate rate exceeds a throughput parameter of the network infrastructure, then the data analysis circuit alters the data collection to reduce the amount of data collected.

In embodiments, the selected data collection routine is switched to a second collection routine to reduce the amount of data being collected.

In embodiments, a channel of the data collector component is deactivated to reduce the amount of data being collected, wherein the channel is one of the plurality of input channels or an output channel.

Methods and systems are disclosed herein for continuous ultrasonic monitoring, including providing continuous ultrasonic monitoring of rotating elements and bearings of an energy production facility; for cloud-based systems including machine pattern recognition based on the fusion of remote, analog industrial sensors or machine pattern analysis of state information from multiple analog industrial sensors to provide anticipated state information for an industrial system; for on-device sensor fusion and data storage for industrial IoT devices, including on-device sensor fusion and data storage for an Industrial IoT device, where data from multiple sensors are multiplexed at the device for storage of a fused data stream; and for self-organizing systems including a self-organizing data marketplace for industrial IoT data, including a self-organizing data marketplace for industrial IoT data, where available data elements are organized in the marketplace for consumption by consumers based on training a self-organizing facility with a training set and feedback from measures of marketplace success, for self-organizing data pools, including self-organization of data pools based on utilization and/or yield metrics, including utilization and/or yield metrics that are tracked for a plurality of data pools, a self-organized swarm of industrial data collectors, including a self-organizing swarm of industrial data collectors that organize among themselves to optimize data collection based on the capabilities and conditions of the members of the swarm, a self-organizing collector, including a self-organizing, multi-sensor data collector that can optimize data collection, power and/or yield based on conditions in its environment, a self-organizing storage for a multi-sensor data collector, including self-organizing storage for a multi-sensor data collector for industrial sensor data, a self-organizing network coding for a multi-sensor data network, including self-organizing network coding for a data network that transports data from multiple sensors in an industrial data collection environment.

Methods and systems are disclosed herein for training artificial intelligence ("AI") models based on industry-specific feedback, including training an AI model based on industry-specific feedback that reflects a measure of utilization, yield, or impact, where the AI model operates on sensor data from an industrial environment; for an industrial IoT distributed ledger, including a distributed ledger supporting the tracking of transactions executed in an automated data marketplace for industrial IoT data; for a network-sensitive collector, including a network condition-sensitive, self-organizing, multi-sensor data collector that can optimize based on bandwidth, quality of service, pricing, and/or other network conditions; for a remotely organized universal data collector that can power up and down sensor interfaces based on need and/or conditions identified in an industrial data collection environment; and for a haptic or multi-sensory user interface, including a wearable haptic or multi-sensory user interface for an industrial sensor data collector, with vibration, heat, electrical, and/or sound outputs.

Methods and systems are disclosed herein for a presentation layer for augmented reality and virtual reality (AR/VR) industrial glasses, where heat map elements are presented based on patterns and/or parameters in collected data; and for condition-sensitive, self-organized tuning of AR/VR interfaces based on feedback metrics and/or training in industrial environments.

In embodiments, a system for data collection, processing, and utilization of signals from at least a first element in a first machine in an industrial environment includes a platform including a computing environment connected to a local data collection system having at least a first sensor signal and a second sensor signal obtained from at least the first machine in the industrial environment. The system includes a first sensor in the local data collection system configured to be connected to the first machine and a second sensor in the local data collection system. The system further includes a crosspoint switch in the local data collection system having multiple inputs and multiple outputs including a first input connected to the first sensor and a second input connected to the second sensor. Throughout the present disclosure, wherever a crosspoint switch, multiplexer (MUX) device, or other multiple-input multiple-output data collection or communication device is described, any multi-sensor acquisition device is also contemplated herein. In certain embodiments, a multi-sensor acquisition device includes one or more channels configured for, or compatible with, an analog sensor input. The multiple outputs include a first output and second output configured to be switchable between a condition in which the first output is configured to switch between delivery of the first sensor signal and the second sensor signal and a condition in which there is simultaneous delivery of the first sensor signal from the first output and the second sensor signal from the second output. Each of multiple inputs is configured to be individually assigned to any of the multiple outputs, or combined in any subsets of the inputs to the outputs. Unassigned outputs are configured to be switched off, for example by producing a high-impedance state.

In embodiments, the first sensor signal and the second sensor signal are continuous vibration data about the industrial environment. In embodiments, the second sensor in the local data collection system is configured to be connected to the first machine. In embodiments, the second sensor in the local data collection system is configured to be connected to a second machine in the industrial environment. In embodiments, the computing environment of the platform is configured to compare relative phases of the first and second sensor signals. In embodiments, the first sensor is a single-axis sensor and the second sensor is a three-axis sensor. In embodiments, at least one of the multiple inputs of the crosspoint switch includes internet protocol, front-end signal conditioning, for improved signal-to-noise ratio. In embodiments, the crosspoint switch includes a third input that is configured with a continuously monitored alarm having a pre-determined trigger condition when the third input is unassigned to or undetected at any of the multiple outputs.

In embodiments, the local data collection system includes multiple multiplexing units and multiple data acquisition units receiving multiple data streams from multiple machines in the industrial environment. In embodiments, the local data collection system includes distributed complex programmable hardware device ("CPLD") chips each dedicated to a data bus for logic control of the multiple multiplexing units and the multiple data acquisition units that receive the multiple data streams from the multiple machines in the industrial environment. In embodiments, the local data collection system is configured to provide high-amperage input capability using solid state relays. In embodiments, the local data collection system is configured to power-down at least one of an analog sensor channel and a component board.

In embodiments, the local data collection system includes a phase-lock loop bandpass tracking filter configured to obtain slow-speed revolutions per minute ("RPMs") and phase information. In embodiments, the local data collection system is configured to digitally derive phase using on-board timers relative to at least one trigger channel and at least one of the multiple inputs. In embodiments, the local data collection system includes a peak-detector configured to autoscale using a separate analog-to-digital converter for peak detection. In embodiments, the local data collection system is configured to route at least one trigger channel that is raw and buffered into at least one of the multiple inputs. In embodiments, the local data collection system includes at least one delta-sigma analog-to-digital converter that is configured to increase input oversampling rates to reduce sampling rate outputs and to minimize anti-aliasing filter requirements. In embodiments, the distributed CPLD chips each dedicated to the data bus for logic control of the multiple multiplexing units and the multiple data acquisition units includes as high-frequency crystal clock reference configured to be divided by at least one of the distributed CPLD chips for at least one delta-sigma analog-to-digital converter to achieve lower sampling rates without digital resampling.

In embodiments, the local data collection system is configured to obtain long blocks of data at a single relatively high-sampling rate as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units each having an onboard card set configured to store calibration information and maintenance history of a data acquisition unit in which the onboard card set is located. In embodiments, the local data collection system is configured to plan data acquisition routes based on hierarchical templates.

In embodiments, the local data collection system is configured to manage data collection bands. In embodiments, the data collection bands define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system is configured to create data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the local data collection system includes a graphical user interface ("GUI") system configured to manage the data collection bands. In embodiments, the GUI system includes an expert system diagnostic tool. In embodiments, the platform includes cloud-based, machine pattern analysis of state information from multiple sensors to provide anticipated state information for the industrial environment. In embodiments, the platform is configured to provide self-organization of data pools based on at least one of the utilization metrics and yield metrics. In embodiments, the platform includes a self-organized swarm of industrial data collectors. In embodiments, the local data collection system includes a wearable haptic user interface for an industrial sensor data collector with at least one of vibration, heat, electrical, and sound outputs.

In embodiments, multiple inputs of the crosspoint switch include a third input connected to the second sensor and a fourth input connected to the second sensor. The first sensor signal is from a single-axis sensor at an unchanging location associated with the first machine. In embodiments, the second sensor is a three-axis sensor. In embodiments, the local data collection system is configured to record gap-free digital waveform data simultaneously from at least the first input, the second input, the third input, and the fourth input. In embodiments, the platform is configured to determine a change in relative phase based on the simultaneously recorded gap-free digital waveform data. In embodiments, the second sensor is configured to be movable to a plurality of positions associated with the first machine while obtaining the simultaneously recorded gap-free digital waveform data. In embodiments, multiple outputs of the crosspoint switch include a third output and fourth output. The second, third, and fourth outputs are assigned together to a sequence of tri-axial sensors each located at different positions associated with the machine. In embodiments, the platform is configured to determine an operating deflection shape based on the change in relative phase and the simultaneously recorded gap-free digital waveform data.

In embodiments, the unchanging location is a position associated with the rotating shaft of the first machine. In embodiments, tri-axial sensors in the sequence of the tri-axial sensors are each located at different positions on the first machine but are each associated with different bearings in the machine. In embodiments, tri-axial sensors in the sequence of the tri-axial sensors are each located at similar positions associated with similar bearings but are each associated with different machines. In embodiments, the local data collection system is configured to obtain the simultaneously recorded gap-free digital waveform data from the first machine while the first machine and a second machine are both in operation. In embodiments, the local data collection system is configured to characterize a contribution from the first machine and the second machine in the simultaneously recorded gap-free digital waveform data from the first machine. In embodiments, the simultaneously recorded gap-free digital waveform data has a duration that is in excess of one minute.

In embodiments, a method of monitoring a machine having at least one shaft supported by a set of bearings includes monitoring a first data channel assigned to a single-axis sensor at an unchanging location associated with the machine. The method includes monitoring second, third, and fourth data channels each assigned to an axis of a three-axis sensor. The method includes recording gap-free digital waveform data simultaneously from all of the data channels while the machine is in operation and determining a change in relative phase based on the digital waveform data.

In embodiments, the tri-axial sensor is located at a plurality of positions associated with the machine while obtaining the digital waveform. In embodiments, the second, third, and fourth channels are assigned together to a sequence of tri-axial sensors each located at different positions associated with the machine. In embodiments, the data is received from all of the sensors simultaneously. In embodiments, the method includes determining an operating deflection shape based on the change in relative phase information and the waveform data. In embodiments, the unchanging location is a position associated with the shaft of the machine. In embodiments, the tri-axial sensors in the sequence of the tri-axial sensors are each located at different positions and are each associated with different bearings in the machine. In embodiments, the unchanging location is a position associated with the shaft of the machine. The tri-axial sensors in the sequence of the tri-axial sensors are each located at different positions and are each associated with different bearings that support the shaft in the machine.

In embodiments, the method includes monitoring the first data channel assigned to the single-axis sensor at an unchanging location located on a second machine. The method includes monitoring the second, the third, and the fourth data channels, each assigned to the axis of a three-axis sensor that is located at the position associated with the second machine. The method also includes recording gap-free digital waveform data simultaneously from all of the data channels from the second machine while both of the machines are in operation. In embodiments, the method includes characterizing the contribution from each of the machines in the gap-free digital waveform data simultaneously from the second machine.

In embodiments, a method for data collection, processing, and utilization of signals with a platform monitoring at least a first element in a first machine in an industrial environment includes obtaining, automatically with a computing environment, at least a first sensor signal and a second sensor signal with a local data collection system that monitors at least the first machine. The method includes connecting a first input of a crosspoint switch of the local data collection system to a first sensor and a second input of the crosspoint switch to a second sensor in the local data collection system. The method includes switching between a condition in which a first output of the crosspoint switch alternates between delivery of at least the first sensor signal and the second sensor signal and a condition in which there is simultaneous delivery of the first sensor signal from the first output and the second sensor signal from a second output of the crosspoint switch. The method also includes switching off unassigned outputs of the crosspoint switch into a high-impedance state.

In embodiments, the first sensor signal and the second sensor signal are continuous vibration data from the industrial environment. In embodiments, the second sensor in the local data collection system is connected to the first machine. In embodiments, the second sensor in the local data collection system is connected to a second machine in the industrial environment. In embodiments, the method includes comparing, automatically with the computing environment, relative phases of the first and second sensor signals. In embodiments, the first sensor is a single-axis sensor and the second sensor is a three-axis sensor. In embodiments, at least the first input of the crosspoint switch includes internet protocol front-end signal conditioning for improved signal-to-noise ratio.

In embodiments, the method includes continuously monitoring at least a third input of the crosspoint switch with an alarm having a pre-determined trigger condition when the third input is unassigned to any of multiple outputs on the crosspoint switch. In embodiments, the local data collection system includes multiple multiplexing units and multiple data acquisition units receiving multiple data streams from multiple machines in the industrial environment. In embodiments, the local data collection system includes distributed CPLD chips each dedicated to a data bus for logic control of the multiple multiplexing units and the multiple data acquisition units that receive the multiple data streams from the multiple machines in the industrial environment. In embodiments, the local data collection system provides high-amperage input capability using solid state relays.

In embodiments, the method includes powering down at least one of an analog sensor channel and a component board of the local data collection system. In embodiments, the local data collection system includes an external voltage reference for an A/D zero reference that is independent of the voltage of the first sensor and the second sensor. In embodiments, the local data collection system includes a phase-lock loop bandpass tracking filter that obtains slow-speed RPMs and phase information. In embodiments, the method includes digitally deriving phase using on-board timers relative to at least one trigger channel and at least one of multiple inputs on the crosspoint switch.

In embodiments, the method includes auto-scaling with a peak-detector using a separate analog-to-digital converter for peak detection. In embodiments, the method includes routing at least one trigger channel that is raw and buffered into at least one of multiple inputs on the crosspoint switch. In embodiments, the method includes increasing input oversampling rates with at least one delta-sigma analog-to-digital converter to reduce sampling rate outputs and to minimize anti-aliasing filter requirements. In embodiments, the distributed CPLD chips are each dedicated to the data bus for logic control of the multiple multiplexing units and the multiple data acquisition units and each include a high-frequency crystal clock reference divided by at least one of the distributed CPLD chips for at least one delta-sigma analog-to-digital converter to achieve lower sampling rates without digital resampling. In embodiments, the method includes obtaining long blocks of data at a single relatively high-sampling rate with the local data collection system as opposed to multiple sets of data taken at different sampling rates. In embodiments, the single relatively high-sampling rate corresponds to a maximum frequency of about forty kilohertz. In embodiments, the long blocks of data are for a duration that is in excess of one minute. In embodiments, the local data collection system includes multiple data acquisition units and each data acquisition unit has an onboard card set that stores calibration information and maintenance history of a data acquisition unit in which the onboard card set is located.

In embodiments, the method includes planning data acquisition routes based on hierarchical templates associated with at least the first element in the first machine in the industrial environment. In embodiments, the local data collection system manages data collection bands that define a specific frequency band and at least one of a group of spectral peaks, a true-peak level, a crest factor derived from a time waveform, and an overall waveform derived from a vibration envelope. In embodiments, the local data collection system includes a neural net expert system using intelligent management of the data collection bands. In embodiments, the local data collection system creates data acquisition routes based on hierarchical templates that each include the data collection bands related to machines associated with the data acquisition routes. In embodiments, at least one of the hierarchical templates is associated with multiple interconnected elements of the first machine. In embodiments, at least one of the hierarchical templates is associated with similar elements associated with at least the first machine and a second machine. In embodiments, at least one of the hierarchical templates is associated with at least the first machine being proximate in location to a second machine.

In embodiments, the method includes controlling a GUI system of the local data collection system to manage the data collection bands. The GUI system includes an expert system diagnostic tool. In embodiments, the computing environment of the platform includes cloud-based, machine pattern analysis of state information from multiple sensors to provide anticipated state information for the industrial environment. In embodiments, the computing environment of the platform provides self-organization of data pools based on at least one of the utilization metrics and yield metrics. In embodiments, the computing environment of the platform includes a self-organized swarm of industrial data collectors. In embodiments, each of multiple inputs of the crosspoint switch is individually assignable to any of multiple outputs of the crosspoint switch.

Methods and systems described herein for industrial machine sensor data streaming, collection, processing, and storage may be configured to operate and integrate with existing data collection, processing and storage systems and may include a method for capturing a plurality of streams of sensed data from sensors deployed to monitor aspects of an industrial machine associated with at least one moving part of the machine; at least one of the streams contains a plurality of frequencies of data. The method may include identifying a subset of data in at least one of the plurality of streams that corresponds to data representing at least one predefined frequency. The at least one predefined frequency is represented by a set of data collected from alternate sensors deployed to monitor aspects of the industrial machine associated with the at least one moving part of the machine. The method may further include processing the identified data with a data processing facility that processes the identified data with an algorithm configured to be applied to the set of data collected from alternate sensors. Lastly, the method may include storing the at least one of the streams of data, the identified subset of data, and a result of processing the identified data in an electronic data set.

Methods and systems described herein for industrial machine sensor data streaming, collection, processing, and storage may be configured to operate and integrate with existing data collection, processing, and storage systems and may include a method for applying data captured from sensors deployed to monitor aspects of an industrial machine associated with at least one moving part of the machine. The data is captured with predefined lines of resolution covering a predefined frequency range and is sent to a frequency matching facility that identifies a subset of data streamed from other sensors deployed to monitor aspects of the industrial machine associated with at least one moving part of the machine. The streamed data includes a plurality of lines of resolution and frequency ranges. The subset of data identified corresponds to the lines of resolution and predefined frequency range. This method may include storing the subset of data in an electronic data record in a format that corresponds to a format of the data captured with predefined lines of resolution and signaling to a data processing facility the presence of the stored subset of data. This method may, optionally, include processing the subset of data with at least one set of algorithms, models and pattern recognizers that corresponds to algorithms, models and pattern recognizers associated with processing the data captured with predefined lines of resolution covering a predefined frequency range.

Methods and systems described herein for industrial machine sensor data streaming, collection, processing, and storage may be configured to operate and integrate with existing data collection, processing and storage systems and may include a method for identifying a subset of streamed sensor data, the sensor data captured from sensors deployed to monitor aspects of an industrial machine associated with at least one moving part of the machine, the subset of streamed sensor data at predefined lines of resolution for a predefined frequency range, and establishing a first logical route for communicating electronically between a first computing facility performing the identifying and a second computing facility, wherein identified subset of the streamed sensor data is communicated exclusively over the established first logical route when communicating the subset of streamed sensor data from the first facility to the second facility. This method may further include establishing a second logical route for communicating electronically between the first computing facility and the second computing facility for at least one portion of the streamed sensor data that is not the identified subset. Additionally, this method may further include establishing a third logical route for communicating electronically between the first computing facility and the second computing facility for at least one portion of the streamed sensor data that includes the identified subset and at least one other portion of the data not represented by the identified subset.

Methods and systems described herein for industrial machine sensor data streaming, collection, processing, and storage may be configured to operate and integrate with existing data collection, processing and storage systems and may include a first data sensing and processing system that captures first data from a first set of sensors deployed to monitor aspects of an industrial machine associated with at least one moving part of the machine, the first data covering a set of lines of resolution and a frequency range. This system may include a second data sensing and processing system that captures and streams a second set of data from a second set of sensors deployed to monitor aspects of the industrial machine associated with at least one moving part of the machine, the second data covering a plurality of lines of resolution that includes the set of lines of resolution and a plurality of frequencies that includes the frequency range. The system may enable selecting a portion of the second data that corresponds to the set of lines of resolution and the frequency range of the first data, and processing the selected portion of the second data with the first data sensing and processing system.

Methods and systems described herein for industrial machine sensor data streaming, collection, processing, and storage may be configured to operate and integrate with existing data collection, processing and storage systems and may include a method for automatically processing a portion of a stream of sensed data. The sensed data is received from a first set of sensors deployed to monitor aspects of an industrial machine associated with at least one moving part of the machine. The sensed data is in response to an electronic data structure that facilitates extracting a subset of the stream of sensed data that corresponds to a set of sensed data received from a second set of sensors deployed to monitor the aspects of the industrial machine associated with the at least one moving part of the machine. The set of sensed data is constrained to a frequency range. The stream of sensed data includes a range of frequencies that exceeds the frequency range of the set of sensed data, the processing comprising executing an algorithm on a portion of the stream of sensed data that is constrained to the frequency range of the set of sensed data, the algorithm configured to process the set of sensed data.

Methods and systems described herein for industrial machine sensor data streaming, collection, processing, and storage may be configured to operate and integrate with existing data collection, processing and storage systems and may include a method for receiving first data from sensors deployed to monitor aspects of an industrial machine associated with at least one moving part of the machine. This method may further include detecting at least one of a frequency range and lines of resolution represented by the first data; receiving a stream of data from sensors deployed to monitor the aspects of the industrial machine associated with the at least one moving part of the machine. The stream of data includes: (1) a plurality of frequency ranges and a plurality of lines of resolution that exceeds the frequency range and the lines of resolution represented by the first data; (2) a set of data extracted from the stream of data that corresponds to at least one of the frequency range and the lines of resolution represented by the first data; and (3) the extracted set of data which is processed with a data processing algorithm that is configured to process data within the frequency range and within the lines of resolution of the first data.

Note that in some diagrams and figures in this disclosure, networks such as the internet, carrier networks, internet service provider networks, local area networks (LANs), metro area networks (MANs), wide area networks (WANs), storage area networks (SANs), backhaul networks, cellular networks, satellite networks and the like, may be depicted as clouds. Also note, that certain processes may be referred to as taking place in the cloud and devices may be described as accessing the cloud. In these types of descriptions, the cloud should be understood to be some type of network comprising networking equipment and wireless and/or wired links.

The description above may refer to a client device communicating with a server, but it should be understood that the technology and techniques described herein are not limited to those exemplary devices as the end-points of communication connections or sessions. The end-points may also be referred to as, or may be, senders, transmitters, transceivers, receivers, servers, video servers, content servers, proxy servers, cloud storage units, caches, routers, switches, buffers, mobile devices, tablets, smart phones, handsets, computers, set-top boxes, modems, gaming systems, nodes, satellites, base stations, gateways, satellite ground stations, wireless access points, and the like. The devices at any of the end-points or intermediate nodes of communication connections or sessions may be commercial media streaming boxes such as those implementing Apple TV, Roku, Chromecast, Amazon Fire, Slingbox, and the like, or they may be custom media streaming boxes.

The devices at the any of the end-points or intermediate nodes of communication connections or sessions may be smart televisions and/or displays, smart appliances such as hubs, refrigerators, security systems, power panels and the like, smart vehicles such as cars, boats, busses, trains, planes, carts, and the like, and may be any device on the Internet of Things (IoT). The devices at any of the end-points or intermediate nodes of communication connections or sessions may be single-board computers and/or purpose built computing engines comprising processors such as ARM processors, video processors, system-on-a-chip (SoC), and/or memory such as random access memory (RAM), read only memory (ROM), or any kind of electronic memory components.

Communication connections or sessions may exist between two routers, two clients, two network nodes, two servers, two mobile devices, and the like, or any combination of potential nodes and/or end-point devices. In many cases, communication sessions are bi-directional so that both end-point devices may have the ability to send and receive data. While these variations may not be stated explicitly in every description and exemplary embodiment in this disclosure, it should be understood that the technology and techniques we describe herein are intended to be applied to all types of known end-devices, network nodes and equipment and transmission links, as well as to future end-devices, network nodes and equipment and transmission links with similar or improved performance.

The methods and systems described herein may be deployed in part or in whole through a machine that executes computer software, program codes, and/or instructions on a processor. The present disclosure may be implemented as a method on the machine, as a system or apparatus as part of or in relation to the machine, or as a computer program product embodied in a computer readable medium executing on one or more of the machines. In embodiments, the processor may be part of a server, cloud server, client, network infrastructure, mobile computing platform, stationary computing platform, or other computing platforms. A processor may be any kind of computational or processing device capable of executing program instructions, codes, binary instructions, and the like. The processor may be or may include a signal processor, digital processor, embedded processor, microprocessor, or any variant such as a co-processor (math co-processor, graphic co-processor, communication co-processor, and the like) and the like that may directly or indirectly facilitate execution of program code or program instructions stored thereon. In addition, the processor may enable execution of multiple programs, threads, and codes. The threads may be executed simultaneously to enhance the performance of the processor and to facilitate simultaneous operations of the application. By way of implementation, methods, program codes, program instructions and the like described herein may be implemented in one or more thread. The thread may spawn other threads that may have assigned priorities associated with them; the processor may execute these threads based on priority or any other order based on instructions provided in the program code. The processor, or any machine utilizing one, may include non-transitory memory that stores methods, codes, instructions, and programs as described herein and elsewhere. The processor may access a non-transitory storage medium through an interface that may store methods, codes, and instructions as described herein and elsewhere. The storage medium associated with the processor for storing methods, programs, codes, program instructions or other type of instructions capable of being executed by the computing or processing device may include but may not be limited to one or more of a CD-ROM, DVD, memory, hard disk, flash drive, RAM, ROM, cache, and the like.

A processor may include one or more cores that may enhance speed and performance of a multiprocessor. In embodiments, the process may be a dual core processor, quad core processors, other chip-level multiprocessor and the like that combine two or more independent cores (called a die).

The methods and systems described herein may be deployed in part or in whole through a machine that executes computer software on a server, client, firewall, gateway, hub, router, or other such computer and/or networking hardware. The software program may be associated with a server that may include a file server, print server, domain server, internet server, intranet server, cloud server, and other variants such as secondary server, host server, distributed server, and the like. The server may include one or more of memories, processors, computer readable transitory and/or non-transitory media, storage media, ports (physical and virtual), communication devices, and interfaces capable of accessing other servers, clients, machines, and devices through a wired or a wireless medium, and the like. The methods, programs, or codes as described herein and elsewhere may be executed by the server. In addition, other devices required for execution of methods as described in this application may be considered as a part of the infrastructure associated with the server.

The server may provide an interface to other devices including, without limitation, clients, other servers, printers, database servers, print servers, file servers, communication servers, distributed servers, social networks, and the like. Additionally, this coupling and/or connection may facilitate remote execution of program across the network. The networking of some or all of these devices may facilitate parallel processing of a program or method at one or more location without deviating from the scope of the disclosure. In addition, any of the devices attached to the server through an interface may include at least one storage medium capable of storing methods, programs, code and/or instructions. A central repository may provide program instructions to be executed on different devices. In this implementation, the remote repository may act as a storage medium for program code, instructions, and programs.

The software program may be associated with a client that may include a file client, print client, domain client, internet client, intranet client and other variants such as secondary client, host client, distributed client, and the like. The client may include one or more of memories, processors, computer readable transitory and/or non-transitory media, storage media, ports (physical and virtual), communication devices, and interfaces capable of accessing other clients, servers, machines, and devices through a wired or a wireless medium, and the like. The methods, programs, or codes as described herein and elsewhere may be executed by the client. In addition, other devices required for execution of methods as described in this application may be considered as a part of the infrastructure associated with the client.

The client may provide an interface to other devices including, without limitation, servers, other clients, printers, database servers, print servers, file servers, communication servers, distributed servers, and the like. Additionally, this coupling and/or connection may facilitate remote execution of program across the network. The networking of some or all of these devices may facilitate parallel processing of a program or method at one or more location without deviating from the scope of the disclosure. In addition, any of the devices attached to the client through an interface may include at least one storage medium capable of storing methods, programs, applications, code and/or instructions. A central repository may provide program instructions to be executed on different devices. In this implementation, the remote repository may act as a storage medium for program code, instructions, and programs.

While only a few embodiments of the present disclosure have been shown and described, it will be obvious to those skilled in the art that many changes and modifications may be made thereunto without departing from the spirit and scope of the present disclosure as described in the following claims. All patent applications and patents, both foreign and domestic, and all other publications referenced herein are incorporated herein in their entireties to the full extent permitted by law.

While the many features disclosed herein may be described independent of one another, it should be understood that combinations of those features are possible in various embodiments. In embodiments, such combinations may refer to or include combinations of two or more of: the use of mobile data collectors, for example, wearable devices, handheld devices, mobile robots, and/or mobile vehicles; the use of ledgers, for example, with a blockchain structure, to store records related to predictive maintenance of industrial machines; converting or mapping vibration data to severity units; or predictive maintenance of industrial machines. It should be understood that other combinations of features not explicitly stated in combination herein are possible in accordance with the embodiments of this disclosure.

While the foregoing written description enables one skilled in the art to make and use what is considered presently to be the best mode thereof, those skilled in the art will understand and appreciate the existence of variations, combinations, and equivalents of the specific embodiment, method, and examples herein. The disclosure should therefore not be limited by the above described embodiment, method, and examples, but by all embodiments and methods within the scope and spirit of the disclosure.

The methods and systems described herein may be deployed in part or in whole through a machine that executes computer software, program codes, and/or instructions on a processor. The present disclosure may be implemented as a method on the machine, as a system or apparatus as part of or in relation to the machine, or as a computer program product embodied in a computer readable medium executing on one or more of the machines. In embodiments, the processor may be part of a server, cloud server, client, network infrastructure, mobile computing platform, stationary computing platform, or other computing platforms. A processor may be any kind of computational or processing device capable of executing program instructions, codes, binary instructions and the like, including a central processing unit (CPU), a general processing unit (GPU), a logic board, a chip (e.g., a graphics chip, a video processing chip, a data compression chip, or the like), a chipset, a controller, a system-on-chip (e.g., an RF system on chip, an AI system on chip, a video processing system on chip, or others), an integrated circuit, an application specific integrated circuit (ASIC), a field programmable gate array (FPGA), an approximate computing processor, a quantum computing processor, a parallel computing processor, a neural network processor, or other type of processor. The processor may be or may include a signal processor, digital processor, data processor, embedded processor, microprocessor or any variant such as a co-processor (math co-processor, graphic co-processor, communication co-processor, video co-processor, AI co-processor, and the like) and the like that may directly or indirectly facilitate execution of program code or program instructions stored thereon. In addition, the processor may enable execution of multiple programs, threads, and codes. The threads may be executed simultaneously to enhance the performance of the processor and to facilitate simultaneous operations of the application. By way of implementation, methods, program codes, program instructions and the like described herein may be implemented in one or more threads. The thread may spawn other threads that may have assigned priorities associated with them; the processor may execute these threads based on priority or any other order based on instructions provided in the program code. The processor, or any machine utilizing one, may include non-transitory memory that stores methods, codes, instructions and programs as described herein and elsewhere. The processor may access a non-transitory storage medium through an interface that may store methods, codes, and instructions as described herein and elsewhere. The storage medium associated with the processor for storing methods, programs, codes, program instructions or other type of instructions capable of being executed by the computing or processing device may include but may not be limited to one or more of a CD-ROM, DVD, memory, hard disk, flash drive, RAM, ROM, cache, network-attached storage, server-based storage, and the like.

A processor may include one or more cores that may enhance speed and performance of a multiprocessor. In embodiments, the process may be a dual core processor, quad core processors, other chip-level multiprocessor and the like that combine two or more independent cores (sometimes called a die).

The methods and systems described herein may be deployed in part or in whole through a machine that executes computer software on a server, client, firewall, gateway, hub, router, switch, infrastructure-as-a-service, platform-as-a-service, or other such computer and/or networking hardware or system. The software may be associated with a server that may include a file server, print server, domain server, internet server, intranet server, cloud server, infrastructure-as-a-service server, platform-as-a-service server, web server, and other variants such as secondary server, host server, distributed server, failover server, backup server, server farm, and the like. The server may include one or more of memories, processors, computer readable media, storage media, ports (physical and virtual), communication devices, and interfaces capable of accessing other servers, clients, machines, and devices through a wired or a wireless medium, and the like. The methods, programs, or codes as described herein and elsewhere may be executed by the server. In addition, other devices required for execution of methods as described in this application may be considered as a part of the infrastructure associated with the server.

The server may provide an interface to other devices including, without limitation, clients, other servers, printers, database servers, print servers, file servers, communication servers, distributed servers, social networks, and the like. Additionally, this coupling and/or connection may facilitate remote execution of programs across the network. The networking of some or all of these devices may facilitate parallel processing of a program or method at one or more locations without deviating from the scope of the disclosure. In addition, any of the devices attached to the server through an interface may include at least one storage medium capable of storing methods, programs, code and/or instructions. A central repository may provide program instructions to be executed on different devices. In this implementation, the remote repository may act as a storage medium for program code, instructions, and programs.

The software program may be associated with a client that may include a file client, print client, domain client, internet client, intranet client and other variants such as secondary client, host client, distributed client and the like. The client may include one or more of memories, processors, computer readable media, storage media, ports (physical and virtual), communication devices, and interfaces capable of accessing other clients, servers, machines, and devices through a wired or a wireless medium, and the like. The methods, programs, or codes as described herein and elsewhere may be executed by the client. In addition, other devices required for the execution of methods as described in this application may be considered as a part of the infrastructure associated with the client.

The client may provide an interface to other devices including, without limitation, servers, other clients, printers, database servers, print servers, file servers, communication servers, distributed servers and the like. Additionally, this coupling and/or connection may facilitate remote execution of programs across the network. The networking of some or all of these devices may facilitate parallel processing of a program or method at one or more locations without deviating from the scope of the disclosure. In addition, any of the devices attached to the client through an interface may include at least one storage medium capable of storing methods, programs, applications, code and/or instructions. A central repository may provide program instructions to be executed on different devices. In this implementation, the remote repository may act as a storage medium for program code, instructions, and programs.

In embodiments, one or more of the controllers, circuits, systems, data collectors, storage systems, network elements, components, or the like as described throughout this disclosure may be embodied in or on an integrated circuit, such as an analog, digital, or mixed signal circuit, such as a microprocessor, a programmable logic controller, an application-specific integrated circuit, a field programmable gate array, or other circuit, such as embodied on one or more chips disposed on one or more circuit boards, such as to provide in hardware (with potentially accelerated speed, energy performance, input-output performance, or the like) one or more of the functions described herein. This may include setting up circuits with up to billions of logic gates, flip-flops, multiplexers, and other circuits in a small space, facilitating high speed processing, low power dissipation, and reduced manufacturing cost compared with board-level integration. In embodiments, a digital IC, typically a microprocessor, digital signal processor, microcontroller, or the like may use Boolean algebra to process digital signals to embody complex logic, such as involved in the circuits, controllers, and other systems described herein. In embodiments, a data collector, an expert system, a storage system, or the like may be embodied as a digital integrated circuit ("IC"), such as a logic IC, memory chip, interface IC (e.g., a level shifter, a serializer, a deserializer, and the like), a power management IC and/or a programmable device; an analog integrated circuit, such as a linear IC, RF IC, or the like, or a mixed signal IC, such as a data acquisition IC (including A/D converters, D/A converter, digital potentiometers) and/or a clock/-timing IC.

The methods and systems described herein may be deployed in part or in whole through network infrastructures. The network infrastructure may include elements such as computing devices, servers, routers, hubs, firewalls, clients, personal computers, communication devices, routing devices and other active and passive devices, modules and/or components as known in the art. The computing and/or non-computing device(s) associated with the network infrastructure may include, apart from other components, a storage medium such as flash memory, buffer, stack, RAM, ROM and the like. The processes, methods, program codes, instructions described herein and elsewhere may be executed by one or more of the network infrastructural elements. The methods and systems described herein may be adapted for use with any kind of private, community, or hybrid cloud computing network or cloud computing environment, including those which involve features of software as a service (SaaS), platform as a service (PaaS), and/or infrastructure as a service (IaaS).

The methods, program codes, and instructions described herein and elsewhere may be implemented on a cellular network with multiple cells. The cellular network may either be frequency division multiple access (FDMA) network or code division multiple access (CDMA) network. The cellular network may include mobile devices, cell sites, base stations, repeaters, antennas, towers, and the like. The cell network may be a GSM, GPRS, 3G, 4G, 5G, LTE, EVDO, mesh, or other network types.

The methods, program codes, and instructions described herein and elsewhere may be implemented on or through mobile devices. The mobile devices may include navigation devices, cell phones, mobile phones, mobile personal digital assistants, laptops, palmtops, netbooks, pagers, electronic book readers, music players and the like. These devices may include, apart from other components, a storage medium such as flash memory, buffer, RAM, ROM and one or more computing devices. The computing devices associated with mobile devices may be enabled to execute program codes, methods, and instructions stored thereon. Alternatively, the mobile devices may be configured to execute instructions in collaboration with other devices. The mobile devices may communicate with base stations interfaced with servers and configured to execute program codes. The mobile devices may communicate on a peer-to-peer network, mesh network, or other communications network. The program code may be stored on the storage medium associated with the server and executed by a computing device embedded within the server. The base station may include a computing device and a storage medium. The storage device may store program codes and instructions executed by the computing devices associated with the base station.

The computer software, program codes, and/or instructions may be stored and/or accessed on machine readable media that may include: computer components, devices, and recording media that retain digital data used for computing for some interval of time; semiconductor storage known as random access memory (RAM); mass storage typically for more permanent storage, such as optical discs, forms of magnetic storage like hard disks, tapes, drums, cards and other types; processor registers, cache memory, volatile memory, non-volatile memory; optical storage such as CD, DVD; removable media such as flash memory (e.g., USB sticks or keys), floppy disks, magnetic tape, paper tape, punch cards, standalone RAM disks, Zip drives, removable mass storage, off-line, and the like; other computer memory such as dynamic memory, static memory, read/write storage, mutable storage, read only, random access, sequential access, location addressable, file addressable, content addressable, network attached storage, storage area network, bar codes, magnetic ink, network-attached storage, network storage, NVME-accessible storage, PCIE connected storage, distributed storage, and the like.

The methods and systems described herein may transform physical and/or intangible items from one state to another. The methods and systems described herein may also transform data representing physical and/or intangible items from one state to another.

The elements described and depicted herein, including in flow charts and block diagrams throughout the figures, imply logical boundaries between the elements. However, according to software or hardware engineering practices, the depicted elements and the functions thereof may be implemented on machines through computer executable code using a processor capable of executing program instructions stored thereon as a monolithic software structure, as standalone software modules, or as modules that employ external routines, code, services, and so forth, or any combination of these, and all such implementations may be within the scope of the present disclosure. Examples of such machines may include, but may not be limited to, personal digital assistants, laptops, personal computers, mobile phones, other handheld computing devices, medical equipment, wired or wireless communication devices, transducers, chips, calculators, satellites, tablet PCs, electronic books, gadgets, electronic devices, devices, artificial intelligence, computing devices, networking equipment, servers, routers and the like. Furthermore, the elements depicted in the flow chart and block diagrams or any other logical component may be implemented on a machine capable of executing program instructions. Thus, while the foregoing drawings and descriptions set forth functional aspects of the disclosed systems, no particular arrangement of software for implementing these functional aspects should be inferred from these descriptions unless explicitly stated or otherwise clear from the context. Similarly, it will be appreciated that the various steps identified and described above may be varied, and that the order of steps may be adapted to particular applications of the techniques disclosed herein. As such, the depiction and/or description of an order for various steps should not be understood to require a particular order of execution for those steps, unless required by a particular application, or explicitly stated or otherwise clear from the context.

The methods and/or processes described above, and steps associated therewith, may be realized in hardware, software or any combination of hardware and software suitable for a particular application. The hardware may include a general-purpose computer and/or dedicated computing device or specific computing device or particular aspect or component of a specific computing device. The processes may be realized in one or more microprocessors, microcontrollers, embedded microcontrollers, programmable digital signal processors or other programmable devices, along with internal and/or external memory. The processes may also, or instead, be embodied in an application specific integrated circuit, a programmable gate array, programmable array logic, or any other device or combination of devices that may be configured to process electronic signals. It will further be appreciated that one or more of the processes may be realized as a computer executable code capable of being executed on a machine-readable medium.

The computer executable code may be created using a structured programming language such as C, an object oriented programming language such as C++, or any other high-level or low-level programming language (including assembly languages, hardware description languages, and database programming languages and technologies) that may be stored, compiled or interpreted to run on one of the above devices, as well as heterogeneous combinations of processors, processor architectures, or combinations of different hardware and software, or any other machine capable of executing program instructions. Computer software may employ virtualization, virtual machines, containers, dock facilities, portainers, and other capabilities.

Thus, in one aspect, methods described above and combinations thereof may be embodied in computer executable code that, when executing on one or more computing devices, performs the steps thereof. In another aspect, the methods may be embodied in systems that perform the steps thereof and may be distributed across devices in a number of ways, or all of the functionality may be integrated into a dedicated, standalone device or other hardware. In another aspect, the means for performing the steps associated with the processes described above may include any of the hardware and/or software described above.

While the disclosure has been disclosed in connection with the preferred embodiments shown and described in detail, various modifications and improvements thereon will become readily apparent to those skilled in the art.

The use of the terms "a" and "an" and "the" and similar referents in the context of describing the disclosure (especially in the context of the following claims) is to be construed to cover both the singular and the plural, unless otherwise indicated herein or clearly contradicted by context. The terms "comprising," "with," "including," and "containing" are to be construed as open-ended terms (i.e., meaning "including, but not limited to,") unless otherwise noted. Recitations of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the disclosure and does not pose a limitation on the scope of the disclosure unless otherwise claimed. The term "set" may include a set with a single member. No language in the specification should be construed as indicating any non-claimed element as essential to the practice of the disclosure.

While the foregoing written description enables one skilled to make and use what is considered presently to be the best mode thereof, those skilled in the art will understand and appreciate the existence of variations, combinations, and equivalents of the specific embodiment, method, and examples herein.

## Claims

1. A platform for facilitating development of intelligence in an Industrial Internet of Things, IIoT, system, comprising:
   a plurality of distinct data-handling layers comprising:

   an industrial monitoring systems layer that collects data from or about a plurality of industrial entities in the IIoT system;
   an industrial entity-oriented data storage systems layer that stores the data collected by the industrial monitoring systems layer;
   an adaptive intelligent systems layer that facilitates the coordinated development and deployment of intelligent systems in the IIoT system; and
   an industrial management application platform layer that includes a plurality of applications and that manages the platform in a common application environment,

   wherein the adaptive intelligent systems layer includes a robotic process automation system that develops and deploys automation capabilities for one or more of the plurality of industrial entities in the IIoT system.

2. The platform of claim 1, wherein the robotic process automation system receives data from the industrial monitoring systems layer and the industrial entity-oriented data storage systems layer.

3. The platform of claim 1, wherein the robotic process automation system automates at least one of a set of software functions or a set of physical tasks based on a training set of observations of expert human actions.

4. The platform of claim 1, wherein the robotic process automation system tracks and records a set of states, actions, events, and results that occur by, within, from, or about systems and processes with which a human is engaging in the IIoT system.

5. The platform of claim 1, wherein the robotic process automation system records mouse clicks on a frame of video that appears within a process by which a human reviews the video.

6. The platform of claim 5, wherein the human highlights points of interest within the video, tags objects in the video, captures parameters in the video, or operates on the video within a graphical user interface.

7. The platform of claim 1, wherein the robotic process automation system tracks and records sets of interactions of a human as the human interacts with a set of interfaces associated with a computing device within the IIoT system.

8. The platform of claim 7, wherein the robotic process automation system tracks and records a set of states, actions, events, and results that occur by, within, from, or about systems and processes with which the human is engaging in the IIoT system.

9. The platform of claim 1, wherein the robotic process automation system utilizes an artificial intelligence system to develop and deploy automation capabilities for one or more of the plurality of industrial entities in the IIoT system, and wherein the artificial intelligence system comprises at least one of an expert system, a machine learning system, a deep learning system, or a neural network.

10. The platform of claim 9, wherein the artificial intelligence system is trained with a training set of observations of human interactions and system states, events, and outcomes in the IIoT system.

11. The platform of claim 10, wherein the robotic process automation system obtains the training set.

12. The platform of claim 1, wherein the robotic process automation system records system states, events, and outcomes in a training set.

13. The platform of claim 1, wherein the robotic process automation system tracks and records the observations of human interactions as the human interacts with a set of interfaces associated with a computing device within the IIoT system.

14. The platform of claims 4, 8 and 10, wherein the states, actions, events, and results that occur by, within, from, or about systems and processes with which the human is engaging in the IIoT system at least include elements that were a subject of human interaction, that detail what a state of a system was or is before, during and after the human interaction, and that detail what outputs were provided by the system or what results were achieved.

15. The platform of claim 1, wherein the robotic process automation system further includes a human correction system that receives inputs from a human during an initial automation capability deployment, wherein the human inputs are utilized to improve performance of the automation capability.

16. The platform of claim 1, wherein the robotic process automation system is seeded during a learning phase with a set of expert human interactions in order to develop and deploy the automation capabilities to replicate the expert human interactions.

17. The platform of claim 16, wherein the robotic process automation system enters a deep learning phase subsequent to the learning phase in order to improve performance of the automation capabilities when compared to the expert human interactions, and wherein the robotic process automation system in the deep learning phase utilizes feedback of one or more outcomes to improve performance of the automation capabilities.

**Patentansprüche**

1. Plattform zum Ermöglichen einer Entwicklung von Intelligenz in einem System des industriellen Internets der Dinge, IIoT, umfassend:
mehrere unterschiedliche Datenhandhabungsschichten, die umfassen:

     eine Schicht für industrielle Überwachungssysteme, die Daten von oder über mehrere/n industrielle7n Entitäten in dem IIoT-System sammelt;

eine Schicht für industrielle, entitätsorientierte Datenspeichersysteme, die die Daten speichert, die von der Schicht für industrielle Überwachungssysteme gesammelt werden;

eine Schicht für adaptive intelligente Systeme, die die koordinierte Entwicklung und die Bereitstellung intelligenter Systeme in dem IIoT-System ermöglicht; und

eine Schicht für eine industrielle Verwaltungsanwendungsplattform, die mehrere Anwendungen aufweist und die Plattform in einer gemeinsamen Anwendungsumgebung verwaltet,

wobei die Schicht für adaptive intelligente Systeme ein robotergestütztes Prozessautomatisierungssystem aufweist, das Automatisierungsfähigkeiten für eine oder mehrere der mehreren industriellen Entitäten in dem IIoT-System entwickelt und bereitstellt.

2. Plattform nach Anspruch 1, wobei das robotergestützte Prozessautomatisierungssystem Daten von der Schicht für industrielle Überwachungssysteme und der Schicht für industrielle, entitätsorientierte Datenspeichersysteme empfängt.

3. Plattform nach Anspruch 1, wobei das robotergestützte Prozessautomatisierungssystem mindestens eine aus einem Satz von Softwarefunktionen oder einem Satz von physischen Aufgaben basierend auf einem Trainingssatz von Beobachtungen menschlicher Expertenaktionen automatisiert.

4. Plattform nach Anspruch 1, wobei das robotergestützte Prozessautomatisierungssystem einen Satz von Zuständen, Aktionen, Ereignissen und Ergebnissen verfolgt und aufzeichnet, die durch, innerhalb von, von oder in Bezug auf Systeme/n und Prozesse/n auftreten, die ein Mensch in dem IIoT-System verwendet.

5. Plattform nach Anspruch 1, wobei das robotergestützte Prozessautomatisierungssystem Mausklicks auf einem Videobild aufzeichnet, das innerhalb eines Prozesses erscheint, bei dem ein Mensch das Video überprüft.

6. Plattform nach Anspruch 5, wobei der Mensch innerhalb einer grafischen Benutzeroberfläche interessante Punkte innerhalb des Videos markiert, Objekte in dem Video kennzeichnet, Parameter in dem Video erfasst oder das Video bearbeitet.

7. Plattform nach Anspruch 1, wobei das robotergestützte Prozessautomatisierungssystem Sätze von Interaktionen eines Menschen verfolgt und aufzeichnet, während der Mensch mit einem Satz von Schnittstellen interagiert, die einer Rechenvorrichtung innerhalb des IIoT-Systems zugeordnet sind.

8. Plattform nach Anspruch 7, wobei das robotergestützte Prozessautomatisierungssystem einen Satz von Zuständen, Aktionen, Ereignissen und Ergebnissen verfolgt und aufzeichnet, die durch, innerhalb von, von oder in Bezug auf Systeme/n und Prozesse/n auftreten, die der Mensch in dem IIoT-System verwendet.

9. Plattform nach Anspruch 1, wobei das robotergestützte Prozessautomatisierungssystem ein System künstlicher Intelligenz nutzt, um Automatisierungsfähigkeiten für eine oder mehrere der mehreren industriellen Entitäten in dem IIoT-System zu entwickeln und bereitzustellen, und wobei das System künstlicher Intelligenz mindestens eines von einem Expertensystem, einem Maschinenlernsystem, einem Deep-Learning-System oder einem neuronalen Netz umfasst.

10. Plattform nach Anspruch 9, wobei das System künstlicher Intelligenz mit einem Trainingssatz von Beobachtungen menschlicher Interaktionen sowie von Systemzuständen, Ereignissen und Resultaten in dem IIoT-System trainiert wird.

11. Plattform nach Anspruch 10, wobei das robotergestützte Prozessautomatisierungssystem den Trainingssatz erhält.

12. Plattform nach Anspruch 1, wobei das robotergestützte Prozessautomatisierungssystem Systemzustände, Ereignisse und Resultate in einem Trainingssatz erfasst.

13. Plattform nach Anspruch 1, wobei das robotergestützte Prozessautomatisierungssystem Beobachtungen menschlicher Interaktionen verfolgt und aufzeichnet, während der Mensch mit einem Satz von Schnittstellen interagiert, die einer Rechenvorrichtung innerhalb des IIoT-Systems zugeordnet sind.

14. Plattform nach Anspruch 4, 8 und 10, wobei die Zustände, Aktionen, Ereignisse und Ergebnisse, die durch, innerhalb von, von oder in Bezug auf Systeme/n und Prozesse/n auftreten, mit denen der Mensch im IIoT-System interagiert, mindestens Elemente aufweisen, die Gegenstand menschlicher Interaktion waren, die genau beschreiben, wie der Zustand eines Systems vor, während und nach der menschlichen Interaktion war oder ist, und die genau beschreiben, welche Ausgaben von dem System geliefert wurden oder welche Ergebnisse erzielt wurden.

15. Plattform nach Anspruch 1, wobei das robotergestützte Prozessautomatisierungssystem ferner ein System zur manuellen Korrektur aufweist, das während einer anfänglichen Bereitstellung der Automatisierungsfähigkeit Eingaben von einem Menschen empfängt, wobei die menschlichen Eingaben verwendet werden, um eine Leistung der Automatisierungsfähigkeit zu verbessern.

16. Plattform nach Anspruch 1, wobei das robotergestützte Prozessautomatisierungssystem während einer Lernphase mit einem Satz von menschlichen Experteninteraktionen gefüttert wird, um die Automatisierungsfähigkeiten zu entwickeln und bereitzustellen, um die menschlichen Experteninteraktionen zu replizieren.

17. Plattform nach Anspruch 16, wobei das robotergestützte Prozessautomatisierungssystem im Anschluss an die Lernphase in eine Deep-Learning-Phase eintritt, um eine Leistung der Automatisierungsfähigkeiten im Vergleich zu den menschlichen Experteninteraktionen zu verbessern, und wobei das robotergestützte Prozessautomatisierungssystem in der Deep-Learning-Phase Rückmeldungen zu einem oder mehreren Resultaten nutzt, um eine Leistung der Automatisierungsfähigkeiten durchzuführen.

## Revendications

1. Plate-forme pour faciliter le développement de l'intelligence dans un système d'Internet industriel des objets, IIoT - Industrial Internet of Things, comprenant :
une pluralité de couches de traitement de données distinctes, comprenant :

une couche de systèmes de surveillance industrielle qui collecte des données provenant d'une pluralité d'entités industrielles du système IIoT ou les concernant ;
une couche de systèmes de stockage de données orientée entité industrielle qui stocke les données collectées par la couche de systèmes de surveillance industrielle ;
une couche de systèmes intelligents adaptatifs qui facilite le développement et le déploiement coordonnés de systèmes intelligents dans le système IIoT ; et
une couche de plate-forme d'applications de gestion industrielle qui inclut une pluralité d'applications et qui gère la plate-forme dans un environnement d'application commun,
dans laquelle la couche de systèmes intelligents adaptatifs inclut un système d'automatisation des processus robotiques qui développe et déploie des capacités d'automatisation pour une ou plusieurs entités de la pluralité d'entités industrielles dans le système IIoT.

2. Plate-forme selon la revendication 1, dans laquelle le système d'automatisation des processus robotiques reçoit des données provenant de la couche de systèmes de surveillance industrielle et de la couche de systèmes de stockage de données orientés entité industrielle.

3. Plate-forme selon la revendication 1, dans laquelle le système d'automatisation des processus robotiques automatise au moins une fonction d'un ensemble de fonctions logicielles ou une tâche d'un ensemble de tâches physiques sur la base d'un jeu d'entraînement d'observations d'actions humaines expertes.

4. Plate-forme selon la revendication 1, dans laquelle le système d'automatisation des processus robotiques suit et enregistre un ensemble d'états, d'actions, d'événements et de résultats qui se produisent par, dans, à partir de ou à propos de systèmes et processus avec lesquels un humain interagit dans le système IIoT.

5. Plate-forme selon la revendication 1, dans laquelle le système d'automatisation des processus robotiques enregistre les clics de souris sur une trame vidéo qui apparaît dans un processus par lequel un humain examine la vidéo.

6. Plate-forme selon la revendication 5, dans laquelle l'humain met en évidence des points d'intérêt dans la vidéo, étiquette des objets dans la vidéo, capture des paramètres dans la vidéo, ou opère sur la vidéo dans une interface graphique.

7. Plate-forme selon la revendication 1, dans laquelle le système d'automatisation des processus robotiques suit et enregistre des ensembles d'interactions d'un humain alors que l'humain interagit avec un ensemble d'interfaces associées à un dispositif informatique dans le système IIoT.

8. Plate-forme selon la revendication 7, dans laquelle le système d'automatisation des processus robotiques suit et enregistre un ensemble d'états, d'actions, d'événements et de résultats qui se produisent par, dans, à partir de ou à propos de systèmes et processus avec lesquels l'humain interagit dans le système IIoT.

9. Plate-forme selon la revendication 1, dans laquelle le système d'automatisation des processus robotiques utilise un système d'intelligence artificielle pour développer et déployer des capacités d'automatisation pour une ou plusieurs entités de la pluralité d'entités industrielles du système IIoT, et dans laquelle le système d'intelligence artificielle comprend au moins un système parmi un système expert, un système d'apprentissage automatique, un système d'apprentissage profond ou un réseau neuronal.

10. Plate-forme selon la revendication 9, dans laquelle le système d'intelligence artificielle est entraîné avec un jeu d'entraînement d'observations d'interactions humaines et d'états, d'événements et de résultats de système dans le système IIoT.

11. Plate-forme selon la revendication 10, dans laquelle le système d'automatisation des processus robotiques obtient le jeu d'entraînement.

12. Plate-forme selon la revendication 1, dans laquelle le système d'automatisation des processus robotiques enregistre les états, les événements et les résultats du système dans un jeu d'entraînement.

13. Plate-forme selon la revendication 1, dans laquelle le système d'automatisation des processus robotiques suit et enregistre les observations d'interactions humaines alors que l'humain interagit avec un ensemble d'interfaces associées à un dispositif informatique dans le système IIoT.

14. Plate-forme selon les revendications 4, 8 et 10, dans laquelle les états, actions, événements et résultats qui se produisent par, dans, à partir de ou à propos de systèmes et processus avec lesquels l'humain s'engage dans le système IIoT incluent au moins des éléments qui ont fait l'objet d'une interaction humaine, qui détaillent quel état d'un système existait ou existe avant, pendant et après l'interaction humaine, et qui détaillent quelles sorties ont été fournies par le système ou quels résultats ont été obtenus.

15. Plate-forme selon la revendication 1, dans laquelle le système d'automatisation des processus robotiques inclut en outre un système de correction humaine qui reçoit les entrées d'un humain lors d'un déploiement initial de la capacité d'automatisation, dans laquelle les entrées humaines sont utilisées pour améliorer les performances de la capacité d'automatisation.

16. Plate-forme selon la revendication 1, dans laquelle le système d'automatisation des processus robotiques est initialisé, au cours d'une phase d'apprentissage, avec un ensemble d'interactions humaines expertes afin de développer et de déployer les capacités d'automatisation pour reproduire les interactions humaines expertes.

17. Plate-forme selon la revendication 16, dans laquelle le système d'automatisation des processus robotiques entre dans une phase d'apprentissage profond après la phase d'apprentissage afin d'améliorer les performances des capacités d'automatisation par rapport aux interactions humaines expertes, et dans laquelle, dans la phase d'apprentissage profond, le système d'automatisation des processus robotiques utilise le retour d'information d'un ou plusieurs résultats pour améliorer les performances des capacités d'automatisation.

FIG. 1

FIG. 2

Heavy Industry IoT

FIG. 3

FIG. 4

from
FIG. 1

Internet

70

Programmatic
Data Market

Camera

Tag

Sensor

Data
Pool

FIG. 5

FIG. 6

FIG. 7

FIG. 8

FIG. 9

FIG. 10

EP 4 436 142 B1

FIG. 11

FIG. 12

FIG. 13

4500

| Instrument A 4540 | → | Data Format A 4520 | |
| Instrument B 4542 | → | Data Format B 4522 | |
| Instrument C 4544 | → | Data Format C 4524 | → Streaming Data Collector 4510 |
| Instrument D 4548 | → | Data Format D 4528 | |

FIG. 14

FIG. 15

FIG. 16

FIG. 17

FIG. 18

FIG. 19

EP 4 436 142 B1

FIG. 20

FIG. 21

MasterRaw Data Server 5700

Data Distribution Manager Module 5702

MRDS 5082

New Streaming Data, EP Data via network, USB Stick

New Stream Data Repository 5704

Repository 5708

Mini- Reports & Plots Module 5724

MMP PCSA INFO 5714

PARA SERVER 5730

ID Mapping Table 5718

User Input 5712

Stream Data Analyzer Module 5710

New EP Legacy Data Repository 5722

FIG. 22

FIG. 23

FIG. 24

FIG. 25

FIG. 26

FIG. 27

FIG. 28

**DAQ Driver Module** 6002

**Virtual DAQ INSTRUMENT** 6000

RLN DATA & CONTROL SERVER 6030

DAQ DRIVER SERVICES 6012

ID Mapping Table 6048

LOCAL DATA CONTROL APP 6034

6010

DAQ WEB API Control data collection, sequence, edit, view plots, analyze (incl. expert), communicate, move data, filter...

Expert Analysis Web App Module 6052

Stream Data Analyzer Module 6050

Reports 4916

MMP PCSA INFO STORE 6022

Stream Data 6058

CDMS 5832

EXPERT SYSTEM MODULE 5940

EP 4 436 142 B1

FIG. 29

EP 4 436 142 B1

EP 4 436 142 B1

EndPoint Hardware
6080

Computer    6088

DAQ DEVICE    6084

MUX(ES)    6082

EndPoint Software
Blocks    6090

RDS    6094

DCA    6092

FIG. 30

FIG. 31

FIG. 32

EP 4 436 142 B1

FIG. 33

FIG. 34

EP 4 436 142 B1

FIG. 35

FIG. 36

FIG. 37

FIG. 38

NETWORK RECIPIENT / STORAGE

LOCAL ODSV DATA STORAGE

COLLECTORS

SIGNAL CHANNELS

SWITCH / MULTIPLEXER

SENSORS

CONTROLLER 7802

ODSV PROCESSING FACILITY 7808

TEMPLATE REPOSITORY 7800 (ODSV)

SMART BAND TEMPLATE 7810
SENSOR LIST / ID / LOCATIONS
SWITCH CONFIG
CHANNELS
COLLECTORS
RECIPIENT / STORAGE 7804

REFERENCE SIGNAL
TIMING / AMOUNT
TRIGGER / CONDITION
POST COLLECTION ACTION 7806

FIG. 39

EP 4 436 142 B1

FIG. 40

FIG. 41

EP 4 436 142 B1

FIG. 42

FIG. 43

FIG. 44

FIG. 45

FIG. 46

FIG. 47

REMOTE SERVER
8150
8148

DATA ACQUISITION CIRCUIT
8104

MULTIPLEXER
8112

MULTIPLEXER CONTROL CIRCUIT
8114

DATA ANALYSIS CIRCUIT
8108

COMMUNICATION
8146

DATA STORAGE
8136

8142

8144
8144
8144

8106 . . . . 8106

8160

FIG. 48

FIG. 49

FIG. 50

FIG. 51

FIG. 52

FIG. 53

DATA ACQUISITION CIRCUIT
8504

SIGNAL EVALUATION CIRCUIT
8508

PHASE DETECTION
8528

PHASE LOCK
8530

BAND PASS
8532

DATA STORAGE
8542

8540

8506 . . . 8506

FIG. 54

FIG. 55

EP 4 436 142 B1

FIG. 56

FIG. 57

DATA ACQUISITION CIRCUIT

8726

8726

8722

SIGNAL EVALUATION CIRCUIT
8708

PHASE DETECTION
8712

TIMER
8714

DATA STORAGE
8716

RESPONSE CIRCUIT
8710

8720

8724

8724

8718

**FIG. 58**

FIG. 59

EP 4 436 142 B1

DATA ACQUISITION CIRCUIT

8736

8734

PHASE DETECTION 8712

TIMER 8714

SIGNAL EVALUATION CIRCUIT 8708

DATA STORAGE 8716

RESPONSE CIRCUIT 8710

8720

8706

8706

FIG. 60

DATA ACQUISITION CIRCUIT

8734

SIGNAL EVALUATION CIRCUIT

8708

PHASE DETECTION

8712

TIMER

8714

DATA STORAGE

8742

8720

8706

· · ·

8706

FIG. 61

FIG. 62

FIG. 63

REMOTE SERVER
8776
8774

8758
8756
8760
8754

DATA ACQUISITION CIRCUIT
8704

SIGNAL EVALUATION CIRCUIT
8772

TIMER
8714

PHASE DETECTION
8712

COMMUNICATIONS CIRCUIT
8752

DATA STORAGE
8742

8770

8768

8706
8706

8762

FIG. 64

EP 4 436 142 B1

FIG. 65

FIG. 66

FIG. 67

9028 9028

9030

DATA ACQUISITION CIRCUIT
9004

9026

9026

PEAK
DETECTION
9012

PHASE
DETECTION
9016

BANDPASS
FILTER
9018

SIGNAL EVALUATION CIRCUIT
9008

RESPONSE CIRCUIT
9010

9022

EP 4 436 142 B1

FIG. 68

FIG. 69

FIG. 70

EP 4 436 142 B1

FIG. 71

EP 4 436 142 B1

FIG. 72

FIG. 73

9066

REMOTE SERVER

9056

9054

DATA ACQUISITION CIRCUIT

9006

9006

9006

DATA ACQUISITION CIRCUIT
9004

SIGNAL EVALUATION CIRCUIT
9008

DATA STORAGE
9044

COMMUNICATIONS CIRCUIT
9052

9050

9048

EP 4 436 142 B1

FIG. 74

EP 4 436 142 B1

FIG. 75

FIG. 76

FIG. 77

FIG. 78

EP 4 436 142 B1

FIG. 79

FIG. 80

REMOTE SERVER

9248

9244

DATA ACQUISITION CIRCUIT

DATA ACQUISITION CIRCUIT
9204

SIGNAL EVALUATION CIRCUIT
9208

COMMUNICATIONS CIRCUIT
9246

DATA STORAGE
9216

9242

9250

9206

9206

9206

9260

FIG. 81

FIG. 82

EP 4 436 142 B1

EP 4 436 142 B1

9248

```
                    ┌─────────────────────────────────────────────────┐
                    │  ┌───────────────────────────────────────────┐  │
    ┌──────────┐    │  │         DATA ACQUISITION CIRCUIT          │  │
    │   9406   │◄───┼─►│                                           │  │
    └──────────┘    │  │                  9404                     │  │
         .          │  └───────────────────────────────────────────┘  │
         .          │                      ▲                           │
         .          │                      ▼                           │
    ┌──────────┐    │  ┌───────────────────────────────────────────┐  │
    │   9406   │◄───┼─►│          ┌──────────────────┐             │  │
    └──────────┘    │  │          │    TORSIONAL     │             │  │
                    │  │          │    ANALYSIS      │             │  │
                    │  │          │      9412        │             │  │
                    │  │          └──────────────────┘             │  │
                    │  │       SYSTEM EVALUATION CIRCUIT           │  │
                    │  │                  9408                     │  │
                    │  └───────────────────────────────────────────┘  │
                    │        ▲         ▲              ▲                │
                    │  ┌──────────┐    │     ┌──────────────────┐      │
                    │  │   DATA   │◄───┘     │ RESPONSE CIRCUIT │      │
                    │  │ STORAGE  │◄────────►│                  │      │
                    │  │   9414   │          │      9410        │      │
                    │  └──────────┘          └──────────────────┘      │
                    │                   9402                           │
                    └─────────────────────────────────────────────────┘
```

FIG. 83

FIG. 84

FIG. 85

DATA ACQUISITION CIRCUIT 9434 9432

TORSIONAL ANALYSIS 9412

SIGNAL EVALUATION CIRCUIT 9408

RESPONSE CIRCUIT 9410

DATA STORAGE 9414

9430

9406 . . . 9406

FIG. 86

FIG. 87

REMOTE SERVER

9446

9440

9454

9452

9456

9450

DATA ACQUISITION CIRCUIT

9404

TORSIONAL ANALYSIS

9412

SYSTEM EVALUATION CIRCUIT

9408

COMMUNICATIONS CIRCUIT

9442

9438

DATA STORAGE

9414

9448

9406

. . .

9406

9460

FIG. 88

FIG. 89

REMOTE SERVER
9446
9440

DATA ACQUISITION CIRCUIT

DATA ACQUISITION CIRCUIT
9404

SYSTEM EVALUATION CIRCUIT
9408

COMMUNICATIONS CIRCUIT
9442

DATA STORAGE
9414

9438

9448

9406

9406

9406

9460

FIG. 90

FIG. 91

FIG. 92

**FIG. 93**

9726
9726
9730
DATA ACQUISITION CIRCUIT
9704
SENSOR FAULT DETECTION
9714
OVERLOAD DETECTION
9712
SIGNAL EVALUATION CIRCUIT
9708
RESPONSE CIRCUIT
9710
DATA STORAGE
9716
9720
9724
9724

FIG. 94

**FIG. 95**

FIG. 96

FIG. 97

FIG. 98

722

EP 4 436 142 B1

EP 4 436 142 B1

FIG. 99

FIG. 100

FIG. 101

FIG. 102

EP 4 436 142 B1

FIG. 103

FIG. 104

EP 4 436 142 B1

FIG. 105

FIG. 106

FIG. 107

FIG. 108

EP 4 436 142 B1

FIG. 109

EP 4 436 142 B1

FIG. 110

EP 4 436 142 B1

EP 4 436 142 B1

| SMART BAND | FAILURE MODE |
|---|---|
| ROTOR | OVER HEATING |
| BEARING | WEAR OUT |

11204

BEARING SMART BAND

| ACCEPTABLE RANGE | XX-YY |
|---|---|
| TYPE OF RANGE | TREND |
| MONITORING RATE | ZZZ/TIME |

11206

MACHINE

BEARING
SENSOR
SENSOR

MOTOR
SENSOR
SENSOR

SENSOR
SENSOR
SENSOR

MACHINE

11202

11200

FIG. 111

FIG. 112

FIG. 113

EP 4 436 142 B1

FIG. 114

FIG. 115

EP 4 436 142 B1

FIG. 116

FIG. 117

EP 4 436 142 B1

FIG. 118

FIG. 119

FIG. 120

FIG. 121

FIG. 122

EP 4 436 142 B1

FIG. 123

FIG. 124

EP 4 436 142 B1

EP 4 436 142 B1

12232

```
           ┌─────────────────────────────┐
           │                             │
           │      ╭───────────╮          │
           │     ╱   Data      ╲  ╶12310 │
           │    │  collection   │        │
           │     ╲   rate(s)   ╱         │
           │      ╰───────────╯          │
           │                             │
           │      ╭───────────╮          │
           │     ╱   Update    ╲ ╶12312  │
           │    │ mutliplexing  │        │
           │     ╲ schedule(s) ╱         │
           │      ╰───────────╯          │
           │                             │
           │      ╭───────────╮          │
           │     ╱ Intermediate╲ ╶12314  │
           │    │   storage     │        │
           │     ╲ operation(s)╱         │
           │      ╰───────────╯          │
           │                             │
           │      ╭───────────╮          │
           │     ╱   Further    ╲╶12316  │
           │    │    data       │        │
           │     ╲  collection ╱         │
           │      ╰───────────╯          │
           │                             │
           │      ╭───────────╮          │
           │     ╱ Implement    ╲╶12318  │
           │    │ multiplexing  │        │
           │     ╲ schedule(s) ╱         │
           │      ╰───────────╯          │
           │                             │
           └─────────────────────────────┘
```

FIG. 125

FIG. 126

EP 4 436 142 B1

12240

Target coverage — 12344

Data coverage — 12346

Motion efficiency — 12348

Critical response — 12350

Network interference value(s) — 12352

Attenuated signal (power) — 12354

Attenuated signal (traffic/noise) — 12356

12358 — Quality of service commitment

12360 — Quality of service guarantee

12362 — Service level agreement

12364 — Network obstruction value(s)

FIG. 127

FIG. 128

12520

12512

12522 — Sensor communication circuit

12532

12524 — Sensor data storage profile circuit

Data storage profile

12534

12526 — Sensor data storage implementation circuit

Storage location definition

12528 — Storage planning circuit

Data configuration plan

12536

Storage time definition

12530 — Haptic feedback circuit

12546

12540

Data resolution description

Cloud based data

Sensor data value(s)

External data

Haptic feedback instruction

12538

12542

12544

12548

FIG. 129

EP 4 436 142 B1

12536

12554

12552

12550

LOCATION

12556

TIME

12558

FIG. 130

12540

12560

RESOLUTION

12562

TIME

12564

FIG. 131

FIG. 132

FIG. 133

EP 4 436 142 B1

FIG. 134

FIG. 135

EP 4 436 142 B1

FIG. 136

Heavy Industry IoT

FIG. 137

FIG. 138

FIG. 139

FIG. 140

EP 4 436 142 B1

FIG. 141

FIG. 142

28920

Sensor ID 28922

Routing Data 28924

Sensor Data 28926

Time Stamp 28928

Check Sum 28930

Reporting Record

FIG. 143

FIG. 144

EP 4 436 142 B1

28750

29104 Communication System

29106 Processing System

29124 AI Module

29130 Control Module

29122 Data Processing Module

29128 Analytics Module

29134 Configuration Module

29120 Decoding Module

29126 Notification Module

29132 Dash Board Module

29102 Storage System

29112 Model Data Store

29110 Sensor Kit Data Store

Back End System

FIG. 145

29200

| 29210 |
| Receive Sensor Data From One Or More Sensors |

| 29212 |
| Process The Sensor Data |

| 29214 |
| Encode The Processed Sensor Data |

| 29216 |
| Transmit The Encoded Sensor Data To Backend System |

FIG. 146

29300

| Receive Compressed Sensor Data | 29310 |
| --- | --- |

| Decode Sensor Data | 29312 |
| --- | --- |

| Perform A Backed Operation Using The Decompressed Sensor Data | 29314 |
| --- | --- |

## FIG. 147

29400

| 29410 |
|---|
| Receive Sensor Data From One Or More Sensors |

| 29412 |
|---|
| Normalize And/Or Transform Sensor Data Into Media Frame Compliant Values |

| 29414 |
|---|
| Generate A Block Of Media Frames Based On The Media Frame Values |

| 29416 |
|---|
| Encode Block Of Media Frames Using A Media Encoder |

| 29418 |
|---|
| Transmit Encoded Block As Part Of Media Stream To A Backend Server |

FIG. 148

29500

| 29510 |
| --- |
| Receive An Encoded Block Of A Video Stream |

| 29512 |
| --- |
| Decode The Encoded Block Using A Decoder Corresponding To The Encoder That Encoded The Encoded Block To Obtain A Block Of Media Frames |

| 29514 |
| --- |
| Recreate Sensor Data By Reverse Normalization and/or Inverse Transformation Of The Media Frame Values Of Each Media Frame |

| 29516 |
| --- |
| Perform A Backend Operation Using The Sensor Data |

FIG. 149

29600

| | 29610 |
|---|---|
| Receive Sensor Data From One Or More Sensors | |

| | 29612 |
|---|---|
| Generate One Or More Feature Vectors Based On The Sensor Data | |

| | 29614 |
|---|---|
| Feed The One Or More Feature Vectors To One Or More Machine - Learned Models | |

| | 29616 |
|---|---|
| Determine Transmission And/Or Storage Strategy For The Sensor Data Based On The Outputs Of The One - Or More Machine Learned Models | |

FIG. 150

FIG. 151

FIG. 152

29700

29708

28750
Backend
System

NETWORK
28780

29806
Gateway
Device

29804
Edge
Device

29808

29800

29802
Sensor

28702
Sensor

28702
Sensor

28702
Sensor

28702
Sensor

29802
Sensor

28702
Sensor

28702
Sensor

28702
Sensor

29802
Sensor

28702
Sensor

28702
Sensor

28702
Sensor

EP 4 436 142 B1

775

FIG. 153

EP 4 436 142 B1

28702 Sensor  28702 Sensor  28702 Sensor

28702 Sensor  28702 Sensor  28702 Sensor

28702 Sensor  28702 Sensor  28702 Sensor

28806 Collection Device

28806 Collection Device

28806 Collection Device

28704 Edge Device

29910

30006 Gateway Device

30000

NETWORK 28780

28750 Backend System

FIG. 154

FIG. 155

EP 4 436 142 B1

30200

Backend
System

Sensor Kits

Dashboard

30202 — Register each
sensor kit to a
respective
industrial setting

30204 — Configure each
sensor kit to
monitor physical
characteristics
of respective
industrial setting

30206
Transmit
instances of
sensor data to
backend system

30208 — Process
instances of
sensor data
received from
each sensor kit

30210 — Configure and
populate
dashboard

Provide
monitoring
information 30212

FIG. 156

FIG. 157

EP 4 436 142 B1

30402

30400

30406

30404

FIG. 158

FIG. 159

EP 4 436 142 B1

FIG. 160

Wearable Devices 14000

| Single Device Single Sensor 14002 | Combo Device Single Sensor 14004 | Single Device Multi Sensor 14006 | Combo Device Multi Sensor 14008 |

Intelligent Systems 14018

14010

Collective Processing Mind 14020

Network

Data Pool 14012

Servers 14014

Intelligent Systems 14016

FIG. 161

FIG. 162

EP 4 436 142 B1

FIG. 163

FIG. 164

FIG. 165

FIG. 166

EP 4 436 142 B1

```
        14038
┌────────────────────────────────────────────────────────────────────────┐
│  ┌──────────────────┐   ┌──────────────────┐         ┌──────────────────┐│
│  │ Mobile Robot 1 or│   │ Mobile Robot 2 or│  ● ● ●  │ Mobile Robot N or││
│  │ Mobile Vehicle 1 │   │ Mobile Vehicle 2 │         │ Mobile Vehicle N ││
│  │     14060A       │   │     14060B       │         │     14060N       ││
│  └──────────────────┘   └──────────────────┘         └──────────────────┘│
└────────────────────────────────────────────────────────────────────────┘

        14064
┌────────────────────────────────────────────────────────────────────────┐
│  ┌──────────────────┐   ┌──────────────────┐   ┌──────────────────┐      │
│  │Cognitive Learning│   │Artificial        │   │ Machine Learning │      │
│  │     14066        │   │Intelligence      │   │     14070        │      │
│  └──────────────────┘   │     14068        │   └──────────────────┘      │
│                         └──────────────────┘                             │
└────────────────────────────────────────────────────────────────────────┘

                            14010
                          Network

                       ┌──────────────────┐
                       │ Knowledge Base   │
                       │     14036        │
                       └──────────────────┘
```

FIG. 167

FIG. 168

EP 4 436 142 B1

FIG. 169

FIG. 170

FIG. 171

EP 4 436 142 B1

Client
15004

Image Data Set
Generator
15006

Data Capture
Device
15002

Data Capture
Device
15002

Data Capture
Device
15002

15008

Network

Vision Analytics
Module
15012

Server
15010

15000

FIG. 172

Client
15004

Image Data Set
Generator
15006

Data Capture
Device
15002

Data Capture
Device
15002

15008

Network

Data Capture
Device
15002

Vision Analytics
Module
15012

Image Data Set
Generator
15006

15000

Server
15010

FIG. 173

15008

Network

Image Data
Database
15014

Training Data
Database
15016

Visual Analyzer
15018

Operating
Characteristics
Detector
15020

Vision Analytics Module
15012

FIG. 174

**FIG. 175**

Image Data
Database
15014

Training Data
Database
15016

Visual Analyzer
15018

Operating
Characteristics
Detector
15020

Vision Analytics Module
15012

15008

Network

Deep Learning
System
15030

FIG. 176

FIG. 177

28632 Data/repairs sent to Cloud AI for back calculations/AI refinement

28600

Data Storage Online A.I. 28630

28608 28604 28602
Machine info (Brg Info, Gear Teeth...), Repair Manuals, Maintenance History
Data Storage Online A.I. 28606

28614 ERP
RFID
28612
Machine Parameters

28618 Streams & info stored on cloud
Data Changes 28610
New Tests & Analytics

28628 Parts Ordered
Repairs Scheduled ERP Interface
Contractors Scheduled
CMMS

28626 Parts & Services ordered via cloud provider's partners vendors

Stream Machine Health Monitoring
Stream Analyzer 28624

Stimulate new fault identification

CMMS Interface
Machinery faults identified to classify needed repairs

Data Storage Online A.I. 28622

Data Storage Online A.I. 28616

28620 Machinery Fault Analysis generate work orders from Cloud CMMS

800

EP 4 436 142 B1

FIG. 178

EP 4 436 142 B1

FIG. 179

FIG. 180

| Category | Description | Notes |
|---|---|---|
| Production | Production activity | |
| Parts | List of parts | |
| Quality | Tests and results | |
| Installation | Action taken | |
| Validation | Acceptance testing | |
| Procedures | List of procedures | |
| Operational | Collected data from part sensors | |
| Assembly | Information related to sub-assemblies | |

FIG. 181

| Production | Value | Notes |
|---|---|---|
| Assembly date | xx/yy/zzzz | Work order xxxx |
| Location | Factory #, city, state | |
| Model # | Item # produced | |
| Serial # | Specific serial # | Could include sub-assembly serial numbers |
| Time | Time of day | |
| Work order # | Specific production work order # | May include several work order #s |
| Customer | Customer code | |
| Images | Links to images | As-built images |

FIG. 182

| Machine-level | # and version | Notes |
|---|---|---|
| Calibration | xxx, v2.1 | Weekly |
| Shutdown | yyy, v1.3 | As needed |
| Regulatory | zzz, v11.34 | Updated xx/yy/zzzz |
| Assembly | aaa, v3 | |
| Safety check | bbb, v4.2a | Last run xx/yy/zzzz |
| Image capture | ccc, v1.1 | |
| | | |
| | | |

FIG. 183

FIG. 184

FIG. 185

EP 4 436 142 B1

FIG. 186

# FIG. 187

33300

DISTRIBUTED LEDGER DATA ROLES
33312

DISTRIBUTED LEDGER ROLE BASED ACCESS
33314

SELF ORGANIZING DATA COLLECTOR 33308

MACHINE LEARNING 33310

STORAGE
33316

INDUSTRIAL MACHINE 33304

INDUSTRIAL MACHINE MAINTENANCE DATA ANALYSIS SYSTEM 28602

DISTRIBUTED LEDGER
33302

DISTRIBUTED LEDGER
33302

INDUSTRIAL MACHINE PREDICTIVE MAINTENANCE SYSTEM 28616

DISTRIBUTED LEDGER
33302

INDUSTRIAL FACILITY COMPUTING SYSTEM 33306

DISTRIBUTED LEDGER
33302

CMMS
28622

DISTRIBUTED LEDGER
33302

SERVICE DELIVERY AND TRACKING SYSTEM 28630

DISTRIBUTED LEDGER
33302

EP 4 436 142 B1

FIG. 188

EP 4 436 142 B1

FIG. 189

MACHINE
  PARTS
  IMAGES
  CONFIGS
  INTERNAL STRUCTURES
  USE SCHEDULE

SERVICE
  PROCEDURE
  PARTS

FAILURES
  PARTS
  CONDITIONS
  TIMING
  REPAIR
  RATES / PM ACTIONS

WORKERS
  TRAINING
  EXPERIENCE
    PROCEDURE
    MACHINE TYPE
  LOCATION
  SCHEDULE
  RATING

ARTIFICIAL
INTELLIGENCE
33606

33602

33618

MACHINE
33608

FAILURES
33610

33616

SERVICE
33612

WORKERS
33614

FIG. 190

EP 4 436 142 B1

FIG. 191

EP 4 436 142 B1

FIG. 192

33802

INDUSTRIAL MACHINE 1

INDUSTRIAL MACHINE 2

INDUSTRIAL MACHINE 3

INDUSTRIAL MACHINE 4

33804

FAIL

FAIL

A

B

C

D

BEARING PREVENTIVE
MAINTENANCE SCHEDULE 33808

BEARING PREDICTIVE MAINTENANCE 33806

1

2

33810

33812

INFRARED THERMOGRAPHY <u>33906</u>

ULTRASONIC TESTING <u>33908</u>

MOTOR TESTING <u>33910</u>

CURRENT/VOLTAGE TESTING <u>33912</u>

TORSIONAL TESTING <u>33914</u>

NON-DESTRUCTIVE TESTING <u>33916</u>

POWER DENSITY TESTING <u>33918</u>

SOUND TESTING <u>33920</u>

— 33902

MACHINE LEARNING <u>33904</u>

TEST RESULTS <u>33922</u>

FIG. 193

FIG. 194

EP 4 436 142 B1

FIG. 195

EP 4 436 142 B1

```
SHIPMENT          INSTALLATION      OPERATIONAL       SERVICE           PARTS AND         DIAGNOSTICS
READINESS         34204             SENSOR DATA       EVENTS            SERVICE           ACTIVITY
34202        →                 →    COLLECTION   →    34208        →    ORDERS       →    34212
                                    34206                               34210
```

BLOCKCHAIN™                                                                              MOST RECENT
INITIATION                                                                               TRANSACTION IN
                                                                                         THE BLOCKCHAIN™

# FIG. 196

FIG. 197

Spectal Peak Levels taken with Bearing Cap Mounted
Accelerometer

| Severity | Action | < 1200 cpm<br>< 20 hz<br>mils pk-to-pk | 1200 cpm - 18000 cpm<br>20-300 hz<br>ips pk (inches-per-sec peak) | >18500 cpm<br>> 300hz<br>g's pk |
|---|---|---|---|---|
| | Acceptable | < 2.5 | Level < .15 | < 2.5 |
| * | Watch | 2.5 < Level < 5.0 | .15 < Level < .3 | 2.5 < Level < 5.0 |
| ** | Resurvey | 5.0 < Level < 10.0 | .3 < Level < .6 | 5.0 < Level < 10.0 |
| *** | Action Soon | 10.0 < Level < 16.6 | .6 < Level < 1.0 | 10.0 < Level < 16.6 |
| **** | Immediate | Level > 16.6 | Level > 1.0 | Level > 16.6 |

FIG. 198

SEVERITY/ACTION UNIT-BASED VIBRATION AXIS

CONVENTIONAL VIBRATION MEASURE AXIS

30804

30806

30802

30808

FIG. 199

FIG. 200

| Rotating Comp | Parameter | Value |
|---|---|---|
| Gear x | Tooth Count | 32 |
| Gear y | Tooth Count | 43 |
| Gear Box a | Count of gears | 4 |
| Gear Box a | Type of gears | x |
| Shaft | RPM | 1200 |
| Roller bearing m | Count of balls | 14 |
| Roller bearing m | Race inner diameter | 1.2 |
| Roller bearing m | Race outer diameter | 2.8 |
| Roller bearing m | Number of vanes | 7 |

FIG. 201

GENERATE STREAMS OF HEALTH DATA FOR AT LEAST ONE OF A GEAR, MOTOR AND A ROLLER BEARING  31102

ACCESS CONFIGURATION DATA FOR AT LEAST ONE OF THE GEAR, MOTOR AND ROLLER BEARING  31104

PREDICT GEAR, MOTOR, AND/OR ROLLER BEARING RELATED MAINTENANCE ACTIONS  31106

PRODUCING ORDERS FOR A PREDICTED MAINTENANCE ACTION  31108

VALIDATING MAINTENANCE ACTIONS BASED ON RECEIVED SERVICE DATA FOR THE MAINTENANCE EVENT  31110

FIG. 202

FIG. 203

EP 4 436 142 B1

| Blockchain-Based Lifecycle Management 35002 | Industrial Asset Lifecycle Management 35004 | PCO 35010 | Building Automation and Controls 35021 | Enterprise Asset Management IPX 214 |
|---|---|---|---|---|

| Cloud/PaaS/SaaS 35008 | FOVI 35018 | Autonomous Manufacturing 35020 | Smart Supply Chain 35022 | Inventory Quality Control 35024 | Industrial Analytics 35028 |
|---|---|---|---|---|---|

Industrial Management Application Platform Layer  34902 and Applications 34912

| Adaptive Edge Compute Management System 35030 | Protocol Adaptors AX102 | Packet Acceleration System 35034 | Building Automation and Controls 35021 |
|---|---|---|---|

| Edge Intelligence System 35038 | Adaptive Network System 35040 | State and Event Managers 35044 | Artificial Intelligence Systems 35048 | RPA System 35042 |
|---|---|---|---|---|

Adaptive Intelligent Systems Layer  34904

| Software Interaction Observation Systems 35050 | Indoor Air Quality Monitoring Systems 35072 | Visual Quality Detection Systems 35054 | Physical Process Observation Systems 35058 |
|---|---|---|---|

| Real Time Monitoring Systems 35068 | OBD and Telematics System 35070 | Continuous Emission Monitoring Systems 35074 | Indoor Sound Monitoring 35078 |
|---|---|---|---|

| Sensors and Cameras 35062 | IoT Data Collectors 35064 | Mobile Data Collectors 35052 | Machine Condition Monitoring Systems 35060 |
|---|---|---|---|

Industrial Monitoring Systems Layer 34906 and Data Collection Systems 34918

| Knowledge Graphs 35080 | Network Attached Storage 35082 | IDT 35084 | Virtual Asset Tag 35088 | Blockchains 35090 | Local Storage 35092 |
|---|---|---|---|---|---|

Industrial Entity-Oriented Data Storage Systems Layer 34910

Data Handling Layers 34908

Interface(s) 34980

## FIG. 204

34900

FIG. 205

EP 4 436 142 B1

34900 →

**Process and Application Outputs and Outcomes 34928**

## Industrial Management Application Platform Layer 34902

| Blockchain-Based Lifecycle Management 35002 | Autonomous Manufacturing 35020 | Building Automation and Controls 35021 |
| Cloud/PaaS/SaaS 35008 | PCO 35010 | Industrial Asset Lifecycle Management 35004 | Smart Supply Chain 35022 |
| Inventory Quality Control 35024 | Industrial Analytics 35028 | Enterprise Asset Management IPX 214 | FOVI 35018 |

## Adaptive Intelligent Systems Layer 34904

| Opportunity Miners 35046 | Artificial Intelligence Systems 35048 | RPA System 35042 |

## Industrial Monitoring Systems Layer 34906

| Software Interaction Observation Systems 35050 | Physical Process Observation Systems 35058 |

## Industrial Entity-Oriented Data Storage Systems Layer 34910

| Asset and Facility Data 35050 | Worker Data 34922 | Event Data 34924 |
| Claims Data 34954 | Production Data 34958 | Supply Chain Data 34960 |

**Data Handling Layers 34908**

Interface(s) 34980

**Industrial Entities 34930**
- Manufacturing Facilities 34932
- Transportation Facilities 34932
- Warehousing Facilities 34932
- Facilities 34940
- Collaborative Robotics System 34942
- Workers 34944
- Wearable/Portable Devices 34948
- Processes 34950
- Machines 34952

# FIG. 206

EP 4 436 142 B1

EP 4 436 142 B1

34900

Industrial Management Application Platform Layer 34902 and Applications 34912

Industrial Processes, Workflows, Activities, Events, and Applications 34912

Adaptive Intelligent Systems Layer 34904

Adaptive Edge Compute Management System 35030

Artificial Intelligence Systems 35048

Edge Intelligence System 35038

Industrial Monitoring Systems Layer 34906

Data Collection and Management Systems 34918

Industrial Entity-Oriented Data Storage Systems Layer 34910

Asset and Facility Data 35050

Worker Data 34922

Event Data 34924

Claims Data 34954

Production Data 34958

Supply Chain Data 34960

Data Handling Layers 34908

Interface(s) 34980

Industrial Entities 34930

Facilities 34940

Manufacturing Facilities 34932

Transportation Facilities 34932

Warehousing Facilities 34932

Collaborative Robotics System 34942

Workers 34944

Wearable/Portable Devices 34948

Processes 34950

Machines 34952

FIG. 207

34900

Industrial Entities 34930

Manufacturing Facilities 34932

Transportation Facilities 34932

Warehousing Facilities 34932

Facilities 34940

Collaborative Robotics System 34942

Workers 34944

Wearable/Portable Devices 34948

Processes 34950

Machines 34952

Process and Application Outputs and Outcomes 34928

Interface(s) 34980

Industrial Management Application Platform Layer 34902

Blockchain-Based Lifecycle Management 34902

Cloud/PaaS/SaaS 35008

Inventory Quality Control 35024

PCO 35010

Industrial Analytics 35028

Autonomous Manufacturing 35020

Industrial Asset Lifecycle Management 35004

Enterprise Asset Management IPX 214

Building Automation and Controls 35021

Smart Supply Chain 35022

FOVI 35018

Adaptive Intelligent Systems Layer 34904

Artificial Intelligence Systems 35048

Protocol Adaptors 34902

Industrial Monitoring Systems Layer 34906

Mobile Data Collectors 35052

IoT Data Collectors 35064

Data Handling Layers 34908

Blockchains 35090

IDT 35084

Local Storage 35092

Virtual Asset Tag IPX 288

Industrial Entity-Oriented Data Storage Systems Layer 34910

FIG. 208

FIG. 209

FIG. 210

FIG. 211

MQTT Protocol Connection 35812

Sensor Swarm 35810

Condition Detector 35716

Fail

Adaptation Engine 35724

IoT Data Adaptor IPX35700

Fail

Reply Message(s) 35718

Fail

IOT Platform 35610

HTTP Protocol Connection 35814

HTTP Protocol Connection 35814

FIG. 212

EP 4 436 142 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018284755 A1
- US 8060017 B
- US 8200775 B
- US 8352149 B, Meachem
- US 20170013065 A
- US 20170012861 A
- US 20170012868 A
- US 20170012884 A
- US 20170012885 A
- US 20170012905 A
- US 935885